Europäisches Patentamt

European Patent Office

Office européen des brevets

(19)

(11) Publication number: **0 455 351 A2**

(12) # EUROPEAN PATENT APPLICATION

(21) Application number: **91302938.5**

(51) Int. Cl.⁵: **G06F 15/72**

(22) Date of filing: **04.04.91**

(30) Priority: **24.04.90 IL 94179**

(43) Date of publication of application:
**06.11.91 Bulletin 91/45**

(84) Designated Contracting States:
**AT BE CH DE DK ES FR GB GR IT LI LU NL SE**

(71) Applicant: **SCITEX CORPORATION LTD.**
**7 Hamada Street**
**Herzliya 46103 (IL)**

(72) Inventor: **Zvikler, Adam**
**28 Hagfanim Street**
**Kfar Sirkin (IL)**
Inventor: **Armoni, Nir**
**35 Bar-Kochva Street**
**Ramat Gan (IL)**

(74) Representative: **Hillier, Peter et al**
**Reginald W. Barker & Co., 13, Charterhouse**
**Square**
**London, EC1M 6BA (GB)**

(54) **Electronic retouch apparatus.**

(57) A retouch system including apparatus for defining a color gradient brush having a longitudinal axis extending between two selected relative locations of an image; apparatus for determining the width of the brush in a direction transverse to the longitudinal axis of the brush; apparatus for determining the color sampling area at each of the two selected relative locations independently of the determination of the width of the brush, and apparatus for moving the brush in a desired direction, such that the two relative locations are translated along the image. The color gradient is sometimes termed a "vignette". The two terms are used interchangeably herein.

EP 0 455 351 A2

FIG. 1A

SELECT "FROM" "TO"

SELECT COLOR AT 1st -2st LOCATION

CPU

SELECT GRADIENT

COLOR WEIGHTING

POINT OF ROTATION

SELECT TYPE OF MOTION

FIG 1B

FIG 1E

FIG 1D

FIG1C

FIELD OF THE INVENTION

The present invention relates to the graphic arts generally and more particularly to electronic retouch apparatus.

BACKGROUND OF THE INVENTION

Various types of electronic retouch apparatus are known in the art. A particularly successful product has been the Response System, manufactured and sold by Scitex Corporation of Herzlia, Israel.

SUMMARY OF THE INVENTION

The present invention seeks to provide improved retouch apparatus which is extremely user friendly.

There is thus provided a retouch system including apparatus for defining a color gradient brush having a longitudinal axis extending between two selected relative locations of an image, apparatus for determining the width of the brush in a direction transverse to the longitudinal axis of the brush, apparatus for determining a color sampling area at each of the two selected relative locations independently of the determination of the width of the brush, and apparatus for moving the brush in a desired direction, such that color values defined for the color sampling areas at the two relative locations are translated along the image.

The color gradient is sometimes termed a "vignette". The two terms are used interchangeably herein.

There is also provided in accordance with another preferred embodiment of the present invention a retouch system including apparatus for defining a color gradient brush having a longitudinal axis extending between two selected relative locations of an image, apparatus for selectably determining the color at at least one of the two selected relative locations, independently of the color appearing at the image at such locations, and apparatus for moving the brush in a desired direction, such that the two relative locations are translated along the image.

Further in accordance with a preferred embodiment of the present invention, the system includes apparatus for selectably determining the color at at least one of the two selected relative locations, independently of the color appearing at the image at such locations.

Still further in accordance with a preferred embodiment of the present invention, the apparatus for selectably determining the color is operative to cause the color at one of the two relative selected locations to be translated along the image as the brush is moved in the desired direction, while the color at the other of the two selected relative locations remains the selectably determined color.

Additionally in accordance with a preferred embodiment of the present invention, the apparatus for selectably determining the color is operative to cause the color at both of the two relative selected locations to remain fixed as the brush is moved.

In accordance with still a further preferred embodiment of the present invention there is provided a retouch system including apparatus for defining a color gradient brush having a longitudinal axis extending between two selected relative locations of an image and defining gradients for a plurality of color separations therealong, apparatus for selectably determining the luminance weighting of at least one of the plurality of color separations relative to at least another of the plurality of color separations, and apparatus for moving the brush in a desired direction, such that the two relative locations are translated along the image.

Further in accordance with a preferred embodiment of the present invention, the system includes apparatus for selectably determining the luminance weighting of at least one of a plurality of color separations relative to at least another of the plurality of color separations.

In accordance with still a further preferred embodiment of the present invention there is provided a retouch system including apparatus for defining a color gradient brush having a longitudinal axis extending between two selected relative locations of an image, including apparatus for selectably determining the gradient between the two selected relative locations, and apparatus for moving the brush in a desired direction, such that the two locations and the selectably determined gradient therebetween are translated along the image.

Further in accordance with a preferred embodiment of the present invention, the apparatus for defining a color gradient includes apparatus for selectably determining the gradient between the two selected relative locations.

Still further in accordance with a preferred embodiment of the present invention, the color gradient is a non-linear gradient.

Additionally in accordance with a preferred embodiment of the present invention, the apparatus for defining a color gradient includes apparatus for selectively defining the spatial range of the gradient.

Further in accordance with a preferred embodiment of the present invention, the apparatus for moving the brush includes apparatus for automatically moving the brush in a selected direction between first and second indicated locations.

In accordance with a further preferred embodiment of the present invention, there is provided a retouch system including apparatus for defining a color gradient brush having a longitudinal axis extending between two selected relative locations of an image and apparatus for moving the brush in a rotational motion about a selected rotation location on the image.

Further in accordance with a preferred embodiment of the present invention, the apparatus for moving the brush includes apparatus for moving the brush in a rotational motion about a selected rotation location on the image.

Still further in accordance with a preferred embodiment of the present invention, the selected rotation location lies on the longitudinal axis and may lie at one of the two selected relative locations defining its ends.

Additionally in accordance with a preferred embodiment of the present invention, the apparatus for moving the brush includes apparatus for varying the length of the brush between the two selected relative locations as the brush is moved in rotational motion.

Further in accordance with a preferred embodiment of the present invention, the apparatus for varying the length of the brush between the two selected relative locations as the brush is moved in rotational motion is operative to define a brushed region having a straight line border.

Still further in accordance with a preferred embodiment of the present invention, the apparatus for varying the length of the brush between the two selected relative locations as the brush is moved in rotational motion is operative to define a brushed region having an arbitrary selectable border.

There is also provided in accordance with yet a further preferred embodiment of the present invention a retouch method including the steps of defining a color gradient brush having a longitudinal axis extending between two selected relative locations of an image, determining the width of the brush in a direction transverse to the longitudinal axis of the brush, determining the color sampling area at each of the two selected relative locations independently of the determination of the width of the brush, and moving the brush in a desired direction, such that the two relative locations are translated along the image.

There is also provided in accordance with a further preferred embodiment of the present invention a retouch method including the steps of defining a color gradient brush having a longitudinal axis extending between two selected relative locations of an image, selectably determining the color at at least one of the two selected relative locations, independently of the color appearing at the image at such locations and moving the brush in a desired direction, such that the two relative locations are translated along the image.

Further in accordance with a preferred embodiment of the present invention, the method includes the step of selectably determining the color at at least one of the two selected relative locations, independently of the color appearing at the image at such locations.

Further in accordance with a preferred embodiment of the present invention, the apparatus for selectably determining color is operative to cause the color at one of the two relative selected locations to change as the brush is moved in the desired direction, while the color at the other of the two selected relative locations remains the selectably determined color.

Still further in accordance with a preferred embodiment of the present Invention, the apparatus for selectably determining color is operative to cause the color at both of the two relative selected locations to remain the selectably determined color.

There is also provided in accordance with yet a further preferred embodiment of the present invention a retouch method including the steps of defining a color gradient brush having a longitudinal axis extending between two selected relative locations of an image, defining gradients for a plurality of color separations therealong, selectably determining the luminance weighting of at least one of the plurality of color separations relative to at least another of the plurality of color separations, and moving the brush in a desired direction, such that the two relative locations are translated along the image.

Further in accordance with a preferred embodiment of the present invention, the method also includes the step of selectably determining the luminance weighting of at least one of a plurality of color separations relative to at least another of the plurality of color separations.

There is also provided in accordance with still a further preferred embodiment of the present invention a retouch method including the steps of defining a color gradient brush having a longitudinal axis extending between two selected relative locations of an image, including selectably determining the gradient between the two selected relative locations, and moving the brush in a desired direction, such that the two locations and the selectably determined gradient therebetween are translated along the image.

Further in accordance with a preferred embodiment of the present invention, the step of defining a color gradient includes the step of selectably determining the gradient between the two selected relative locations.

Still further in accordance with a preferred embodiment of the present invention, the color gradient is a non-linear gradient.

Additionally in accordance with a preferred embodiment of the present invention, the step of defining a color gradient includes the step of selectively defining the spatial range of the gradient.

Further in accordance with a preferred embodiment of the present invention, the step of moving the brush includes the step of automatically moving the brush in a selected direction between first and second indicated locations.

In accordance with an additional preferred embodiment of the present invention, there is provided a retouch method including the steps of defining a color gradient brush having a longitudinal axis extending between two selected relative locations of an image, and moving the brush in a desired direction, such that the two relative locations are translated along the image, the step of moving the brush including moving the brush in a rotational motion about a selected rotation location on the image.

Further in accordance with a preferred embodiment of the present invention, the step of moving the brush includes moving the brush in a rotational motion about a selected rotation location on the image.

Still further in accordance with a preferred embodiment of the present invention, the selected rotation location lies on the longitudinal axis.

Additionally in accordance with a preferred embodiment of the present invention, the selected rotation location lies at one of the two selected relative locations defining its ends.

Further in accordance with a preferred embodiment of the present invention, the step of moving the brush includes varying the length of the brush between the two selected relative locations as the brush is moved in rotational motion.

Still further in accordance with a preferred embodiment of the present invention, the step of varying the length of the brush between the two selected relative locations as the brush is moved in rotational motion is operative to define a brushed region having a straight line border.

Additionally in accordance with a preferred embodiment of the present invention, the step of varying the length of the brush between the two selected relative locations as the brush is moved in rotational motion is operative to define a brushed region having an arbitrary selectable border.

There is also provided in accordance with a preferred embodiment of the present invention a system for varying the grain of a color image including apparatus for adding a random value to at least one separation of a plurality of pixels of a color image.

Further in accordance with a preferred embodiment of the present invention, the system for varying includes user interface apparatus, the user interface apparatus including at least one of the following:

apparatus for selecting the amplitude of the random value,

apparatus for selecting at least one separation to which the random value is to be added, and

apparatus for selecting the plurality of pixels to whose color values the random value is to be added.

## BRIEF DESCRIPTION OF THE DRAWINGS

The present invention will be understood and appreciated from the following detailed description, taken in conjunction with the drawings in which:

Fig. 1A is a block diagram illustration of a retouch system constructed and operative in accordance with a preferred embodiment of the present invention;

Fig. 1B is a functional block diagram illustration of the various functions provided by the CPU in the system of Fig. 1A;

Figs. 1C, 1D and 1E are keypad configurations displayed on an auxiliary monitor during operation of the system of Fig. 1A.

Fig. 2A is an illustration of definition of a brush having a longitudinal axis extending between two relative locations on an image;

Fig. 2B is an illustration of definition of the width of the brush of Fig. 2A;

Fig. 2C is an illustration of the selection of matrix size for determining the color value of a location of the brush;

Fig. 2D is an unretouched photograph;

Fig 2E is the photograph of Fig. 2D retouched using the brush of Figs. 2A - 2C;

Fig. 3A is an unretouched photograph;

Fig 3B is the photograph of Fig. 3A retouched using an arbitrary color selection brush in accordance with a preferred embodiment of the present invention;

Fig. 4A illustrates two alternative luminance shifts for the color gradient brush;

Fig. 4B is an unretouched photograph;

Fig 4C is the photograph of Fig. 4B retouched using a color adjustment function provided by the present invention;

Fig. 5A illustrates a linear gradient and a non-linear gradient produced by superimposition thereof of a curve such as that illustrated in Fig. 5B;

Fig. 5C is an unretouched photograph;

Fig 5D is the photograph of Fig. 5C retouched using the selective gradient technique of the present invention;

Fig. 6A illustrates first and second positions of a brush and a line defining the separation between predetermined points thereon, for producing automatic cursor movement;

Fig. 6B is an unretouched photograph;

Fig 6C is the photograph of Fig. 6B retouched using a automatic brush movement function provided by the present invention;

Fig. 6D illustrates first, second and third positions of a brush and a curve defining the relative locations of predetermined points thereon, for producing automatic cursor movement along a user-selected curve;

Fig. 7A illustrates rotation of a brush about a predetermined location on the longitudinal axis of the brush;

Fig. 7B is an unretouched photograph;

Fig. 7C is the photograph of Fig. 7B retouched using the brush rotation illustrated in Fig. 7A;

Fig. 7D illustrates rotation of a brush about a predetermined location which is not on the longitudinal axis of the brush;

Fig. 8A illustrates rotation of a brush about one of the selected relative locations and terminating the brush stroke along a straight line;

Fig. 8B is an unretouched photograph;

Fig. 8C is the photograph of Fig. 8B retouched using the brush rotation technique of Fig. 8A;

Fig. 9A illustrates rotation of a brush about one of the selected relative locations and terminating the brush stroke along a selected pattern;

Fig. 9B is an unretouched photograph;

Fig. 9C is the photograph of Fig. 9B retouched using the brush rotation technique of Fig. 9A; and

Figs. 10A-10G are conceptual illustrations of 7 exemplary brush configurations.

## DETAILED DESCRIPTION OF A PREFERRED EMBODIMENT

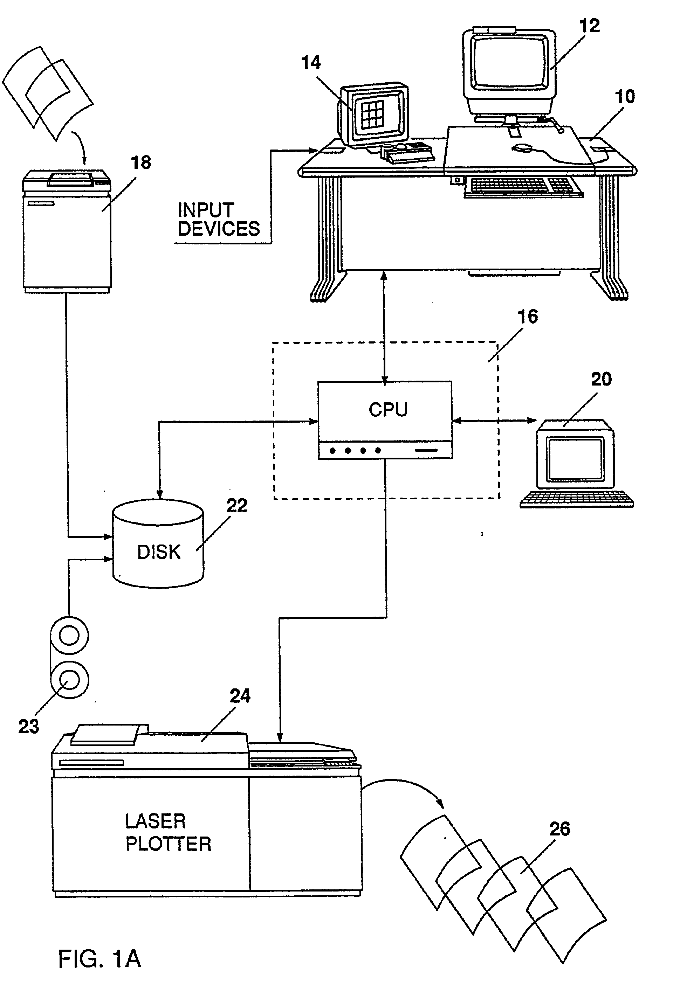

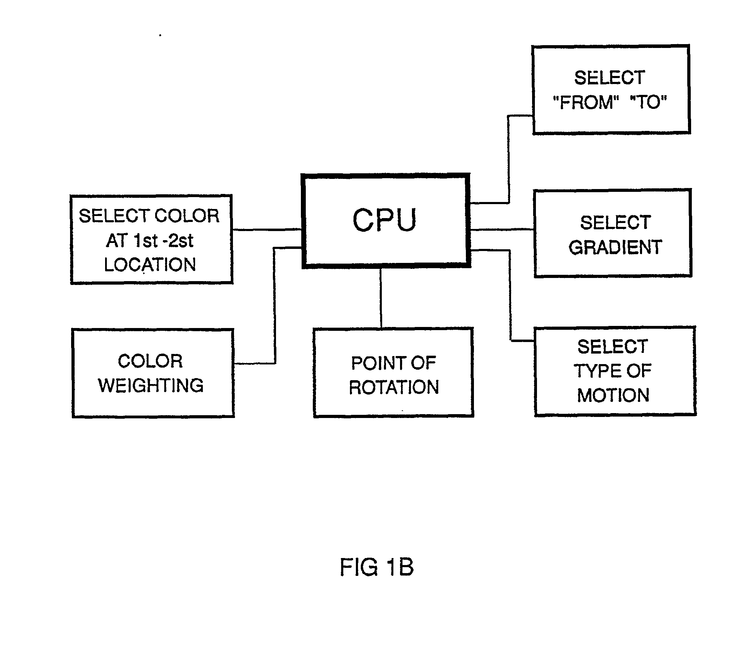

Reference is now made to Figs. 1A and 1B, which provide a generalized illustration of an electronic retouch system constructed and operative in accordance with a preferred embodiment of the present invention.

The system preferably comprises an interactive workstation 10, such as an Imager III, commercially available from Scitex Corporation of Herzlia, Israel and including a high resolution color monitor 12 and an auxiliary monitor 14, which may be a monochromatic CRT. Workstation 10 is preferably associated with a CPU, such as an HP 1000, generally indicated by reference numeral 16. CPU 16 is preferably loaded with Imager III retouch program version 9.02, which is commercially available from the Scitex Corporation Ltd. of Herzlia, Israel in association with the Response 300 System, manufactured and sold by Scitex Corporation Ltd. The Response System normally includes the workstation 10 and CPU 16, as well as a color separation scanner 18, typically the Scitex SMART SCANNER, a CPU terminal 20 and an external memory 22, such as a disk drive, which stores information from scanner 18 and may also receive other data.

The output of the CPU 16 and of the Response system may be provided to a laser plotter 24, such as the Scitex RAYSTAR, which provides color separations 26 on film in a known manner, for use in process color printing.

The present invention will be described in a preferred embodiment in the context of the commercially available Response System and its commercially available software, here the Imager - III Version 9.02. It will be appreciated, however, that the present Invention is not limited to use with the Response system and is applicable generally to electronic retouch systems and techniques.

The functions of the CPU 16 and the workstation 10 are illustrated in a very general manner in Fig. 1B. These include the determination of first and second relative locations on an image displayed on color monitor 12, the locations being termed herein as "FROM" and "TO". It is along a longitudinal axis extending between these two locations that a color gradient is defined in accordance with the present invention. Once the FROM and TO locations have been defined, the colors at the FROM and TO locations may be determined and the color luminance of the brush for one or more color separations may be determined.

Additionally a point of rotation for rotation of the brush, or another selected movement of the brush may be selected, and the nature of the gradient may be defined.

These general functions and more specific operations to be described hereinbelow are provided by the apparatus of Figs. 1A-1E, and, in the preferred embodiment herein described. Additionally, a retouch system constructed and operative in accordance with one embodiment of the present invention may be implemented by employing the Imager III software version 9.02, in conjunction with additional software which appears in a listing attached hereto as Annex A.

The software in Annex A may be entered into the CPU by converting it to magnetic tape format, and loading it into the CPU via a tape drive 23. For loading the software of Annex A into disk drive 22, the following commands are entered via terminal 20 after the OP prompt.

1. FADD, M.
2. FCPUCF 911, 912
3. CPUCF 36, 37, 38, 40, 796
4. NEWSYS

The Imager III system is then reset in a conventional manner.

The system of the present invention is then ready for operation. Various operations provided by the system and technique of the present invention will now be described in detail:

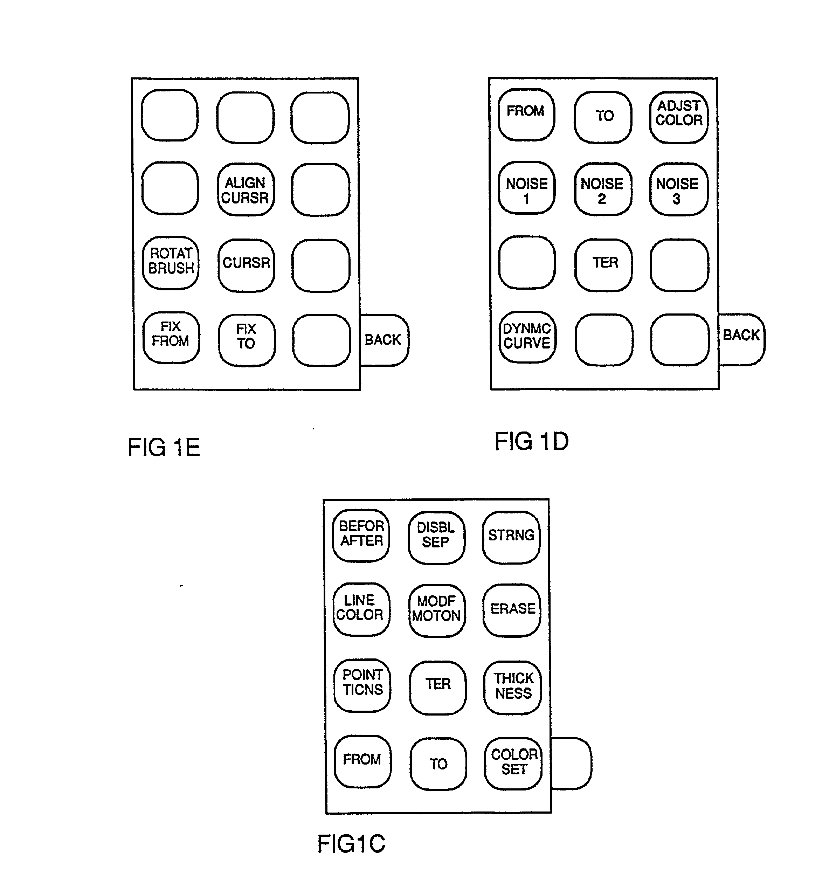

Reference is now made to Figs. 1C - 1E, which illustrate various keypad configurations which are displayed on auxiliary monitor 14 during operation of the system of the present invention.

Operation is typically initiated by entering "TPVN", i.e. Two Point Vignette, at the OP prompt. The operator is then asked by the system to enter the picture identification and the mask identification, which defines the work area. If no mask identification is entered, the function is global.

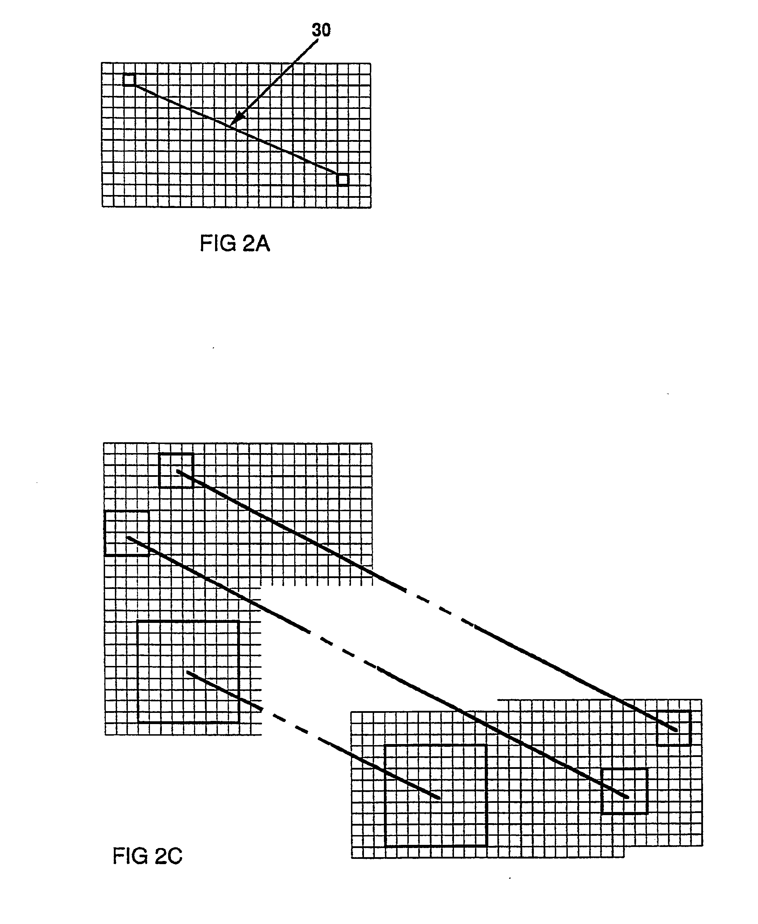

The TPVN keypad illustrated in Fig. 1C is then displayed. By using the FROM and TO keys, the operator selects the FROM and TO relative locations, defining the length of the brush, as illustrated in Fig. 2A. On monitor 12, a longitudinal axis 30, appears and indicates the length of the brush. The definition of the line may employ the Bresenhams Algorithm described in Bresenham,J.E. "Algorithm for Computer control of a Digital Plotter" IBM Syst. J. , 4(1): 25 - 30, 1965. If the yellow cursor button on a mouse forming part of workstation 10 is pressed, the color vignette along axis 30 is displayed.

The YELLOW BUTTON on the mouse of workstation 10 is used to effect paint brush action in accordance with a preferred embodiment of the present invention. Motion of the mouse on the mouse tablet of the workstation 10 generally provides motion of the paint brush or gradient along the image.

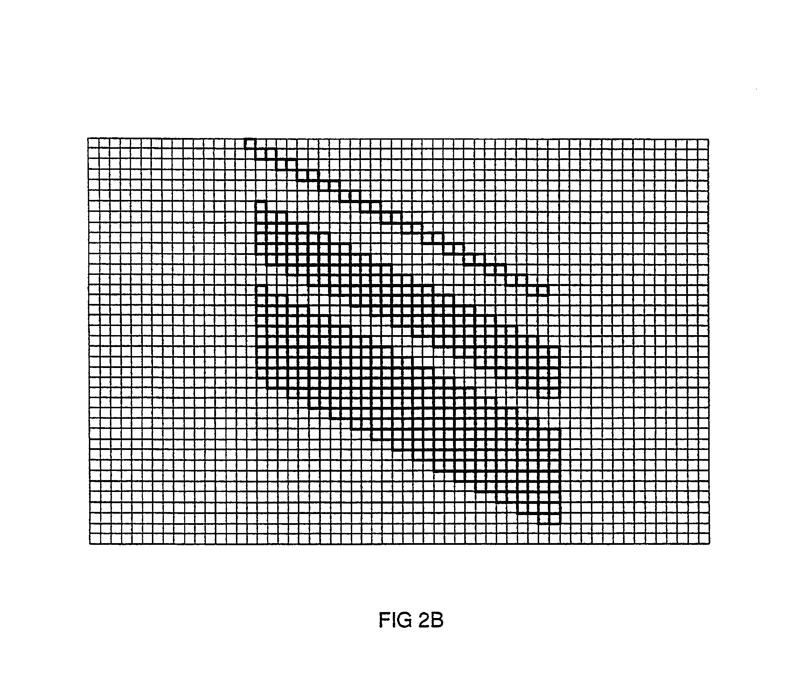

The THICKNESS key may be employed to select the width of the brush. The width indicates the extent of the brush on both sides of the axis 30. Fig. 2B illustrates widths of 1, 5 and 9 pixels.

The POINT TICKN key may be employed to select the size of the matrix or other configuration of pixels used to determine the FROM and TO color values. Fig. 2C illustrates alternative matrices of 3x3, 4x4 and 9x9 pixels. The FROM and TO color values may each be defined as any suitable function of the pixels of the respective FROM and TO matrices. Each function is normally predetermined and may, for example, be a weighted sum of the matrix's pixels. It is a particular feature of the present invention that the matrix size is determined independently of the width of the brush. However, in certain applications, it is desirable that the dimensions of the matrix equal the width or thickness of the brush.

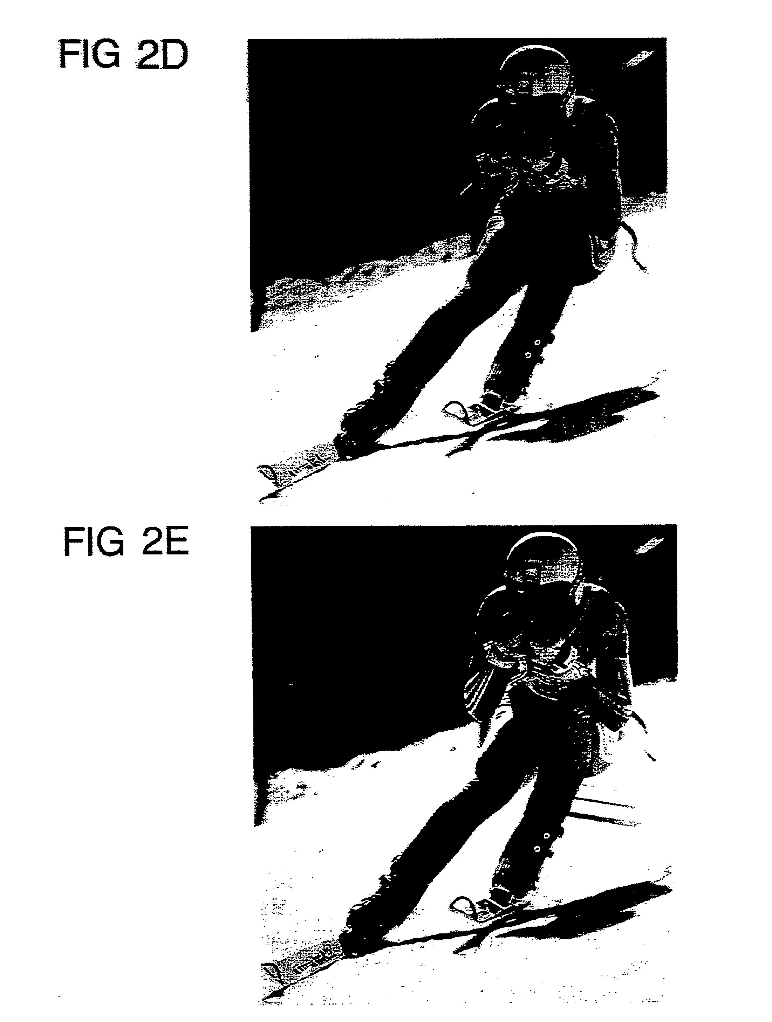

Once the length, width and matrix size have been determined, the brush may be moved on the screen as desired in a conventional electronic retouch mode. An example of retouching done in accordance with the functions illustrated in Figs. 2A - 2C may be seen by comparing the original photograph in Fig. 2D with the retouched photograph in Fig. 2E. In this example, as the brush is moved to a new location of the image, new TO and FROM matrices are defined which define new color values along the brush.

According to another preferred embodiment of the invention, the colors at either or both of the TO and FROM locations may be selected independently of the color appearing at and in the vicinity of the TO and FROM locations on the image for any given brush location.

This may be achieved by pressing on the COLOR SET key on the keypad of Fig. 1C, resulting in the display of the keypad of Fig. 1D. Referring now to the keypad of Fig. 1D, if FROM is pressed, a color bar appears on the screen of monitor 12 and the color value of the FROM point can be changed. Entry of the new color is achieved by selecting a color from a pad or from a given location on the image in a conventional manner and pressing the TER key. A corresponding procedure is used for selecting the color at the TO location. Both colors selected in this way are maintained constant as the brush is moved. If it is desired that the color at only one of the locations remain constant, the appropriate FROM or TO key on the keypad of Fig. 1D should be pressed to indicate that the location is to be kept constant, while the other key should not be pressed.

Preferably, noise may be added to the FROM and TO color values. The level of noise which is added is preferably user-determined. In Fig. 1D, three keys are provided which allow a user to select from among three levels of noise. Alternatively, a user may be allowed to select from among a continuous range of noise levels. The noise option is operative to artificially generate a grain in the portion of the color image which is modified by the brush. The grain may be artificially generated by adding a random value, having an amplitude determined by the noise level selected by the user, preferably to each separation of each pixel falling within the brush. If the amplitude is "a" and the original pixel value is "p" (in %dot), the noise option is operative to define a new pixel value as follows:

```
                        random (0,2p)            if p < a

new pixel value =       random (p-a,p+a)         if a <= p <= 100-a

                        random (100-2p, 100)     if p >= 100 - a
```

where random(b,c) indicates a randomly generated integer between "b" and "c". Any conventional random number generator may be employed to generate the random integers.

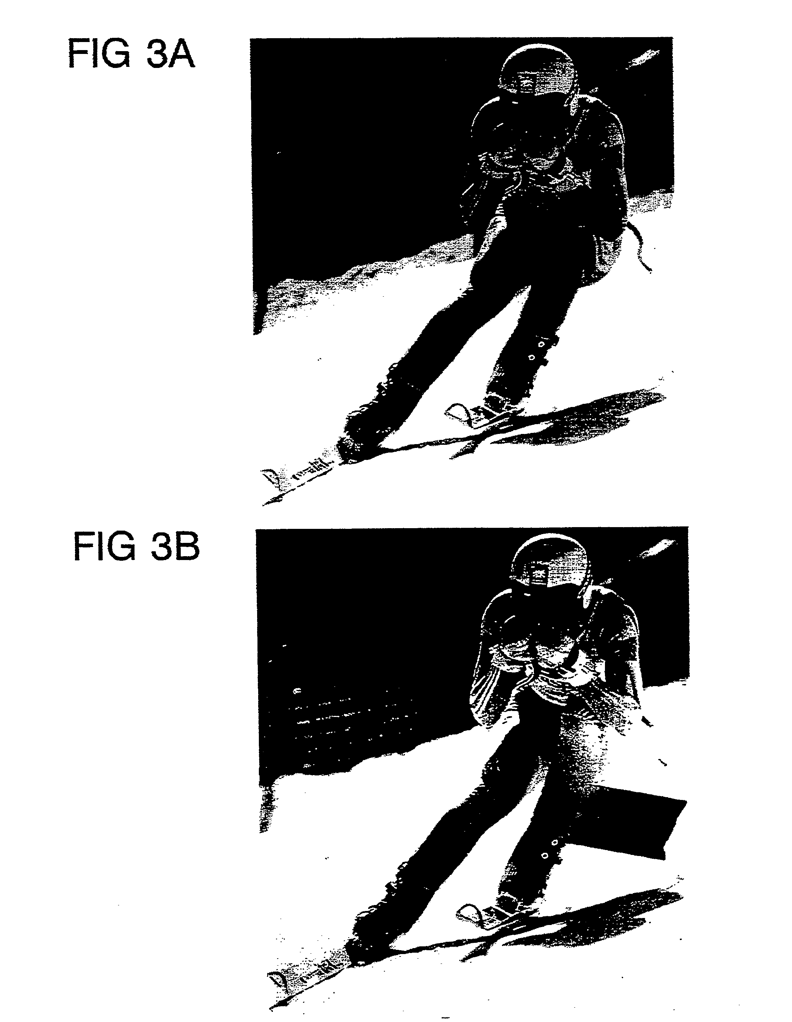

Once one, both or no constant colors have been determined, the brush may be moved on the screen as desired in a conventional electronic retouch mode. An example of retouching done in accordance with the constant color selection functions described above may be seen by comparing the original photograph in Fig. 3A with the retouched photograph in Fig. 3B. In this example, as the brush is moved, the matrix which determines the TO color moves along the image while the color at the FROM location remains constant.

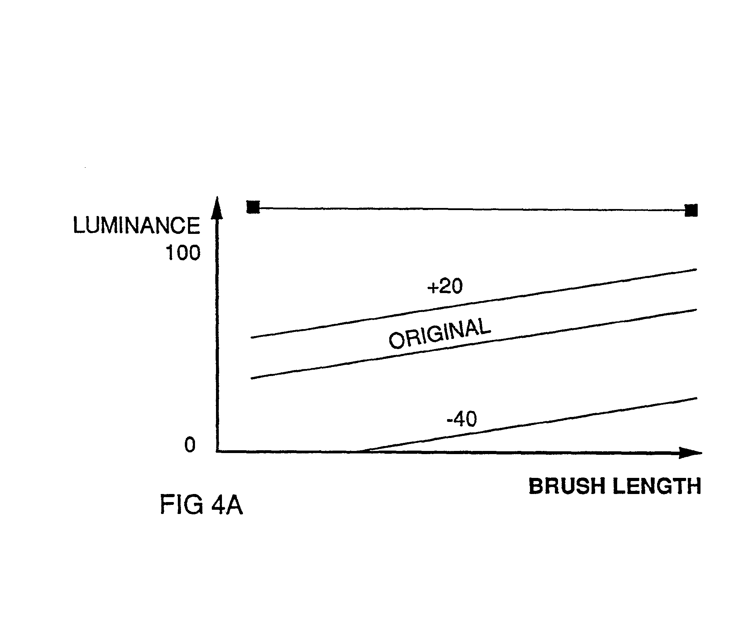

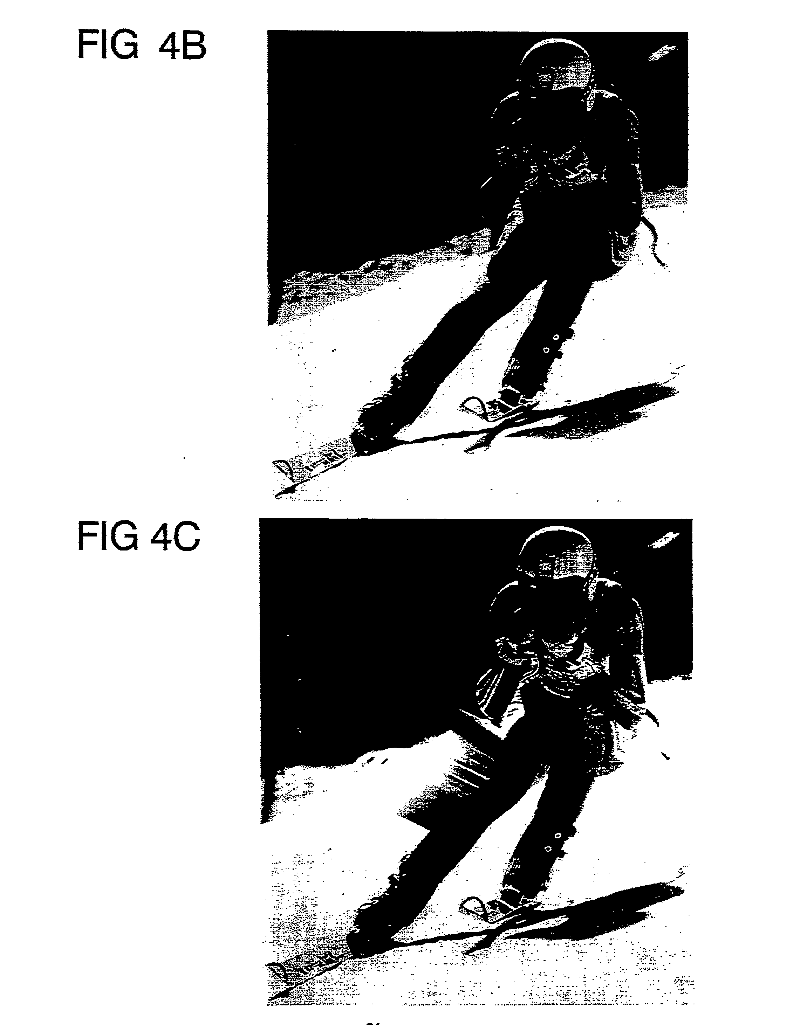

According to an additional preferred embodiment of the present invention, the color of each gradient may be additionally adjusted for each color separation by using the ADJST COLOR key in the keypad of Fig. 1D. A value typically in the range of +/- 100% of the luminance may be selected. For example, as illustrated in Fig. 4A, if the luminance for a given separation, such as cyan varies from 30 at FROM to 40 at TO and a + 20% ADJUST COLOR selection is made, the resulting luminance values will be 36 at FROM and 48 at TO. Similarly, also as shown at Fig. 4 if a - 40% ADJUST COLOR selection is made, the resulting luminance values will be 18 at FROM and 24 at TO.

An example of retouching done in accordance with the adjusted color selection functions described above may be seen by comparing the original photograph in Fig. 4B with the retouched photograph in Fig. 4C, and comparing that with the retouched photograph of Fig. 2E. In this example, as compared with the photograph of Fig. 2E, the luminance in cyan is reduced by 40 percent.

So far, the gradients between the TO and FROM locations have been linear. According to the present invention, a desired linear or non-linear gradient may be selected by pressing the DYNMC CURVE key on the keypad of Fig. 1D.

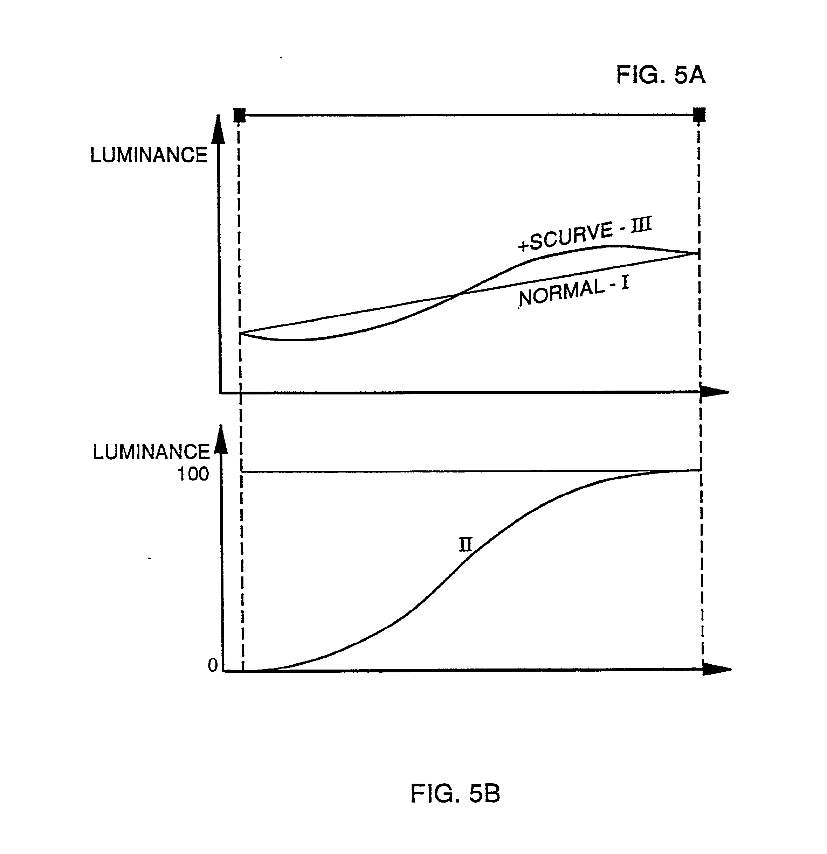

Referring now to Figs. 5A and 5B, the linear gradient is shown at trace I, while a typical stored gradient configuration, which may be stored in a look-up-table, is illustrated at trace II. A modified gradient, produced by multiplication of the gradient at trace I by the stored gradient II, is illustrated in trace III. This trace may define the gradient used in the brush of the present invention.

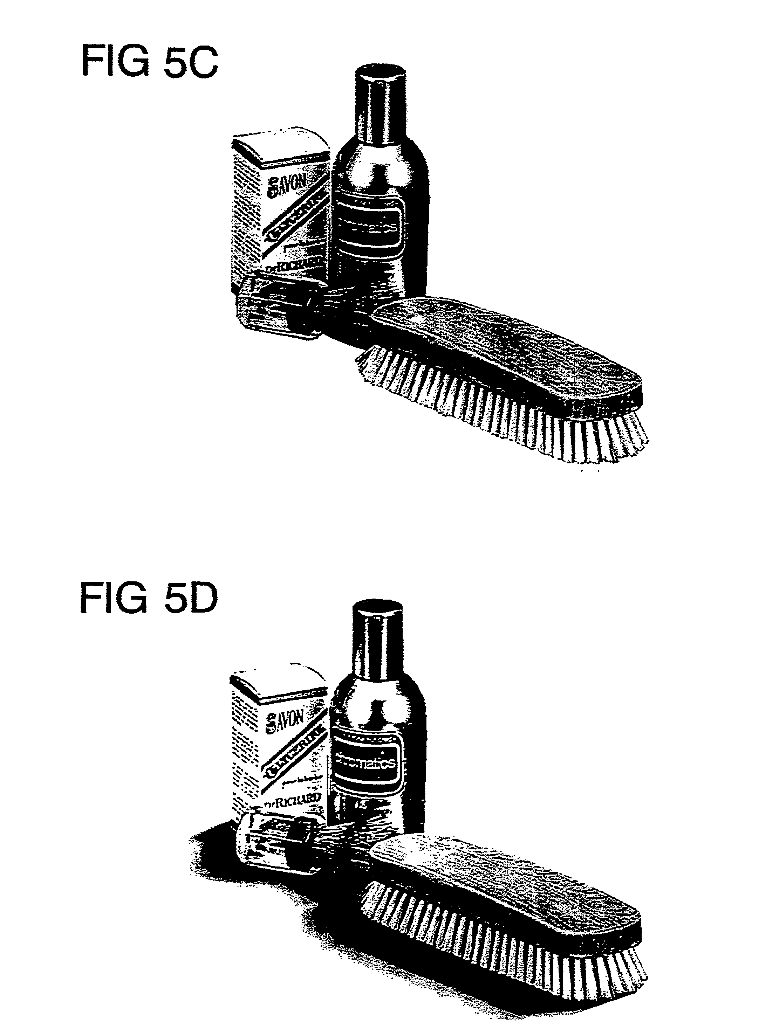

An example of retouching done in accordance with the selective gradient configuration function described above may be seen by comparing the original photograph in Fig. 5C with the retouched photograph in Fig. 5D.

In accordance with one embodiment of the invention, motion of the brush along the image is provided by movement of a mouse or other manual control. According to a preferred embodiment of the invention, a point to point brush translation function is provided, by pressing the MODFY MOTN key on the keypad of Fig. 1C. In response, the keyboard of Fig. 1E is displayed.

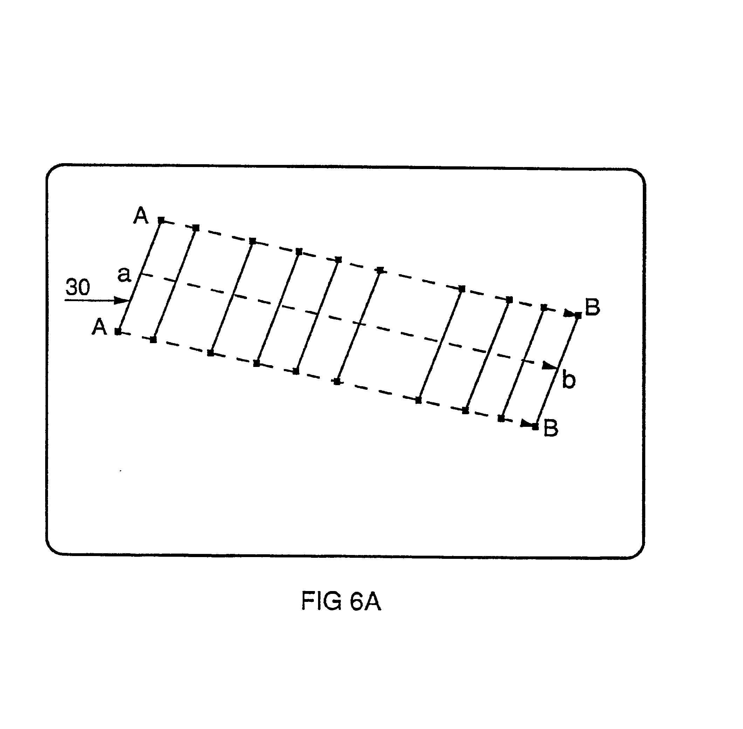

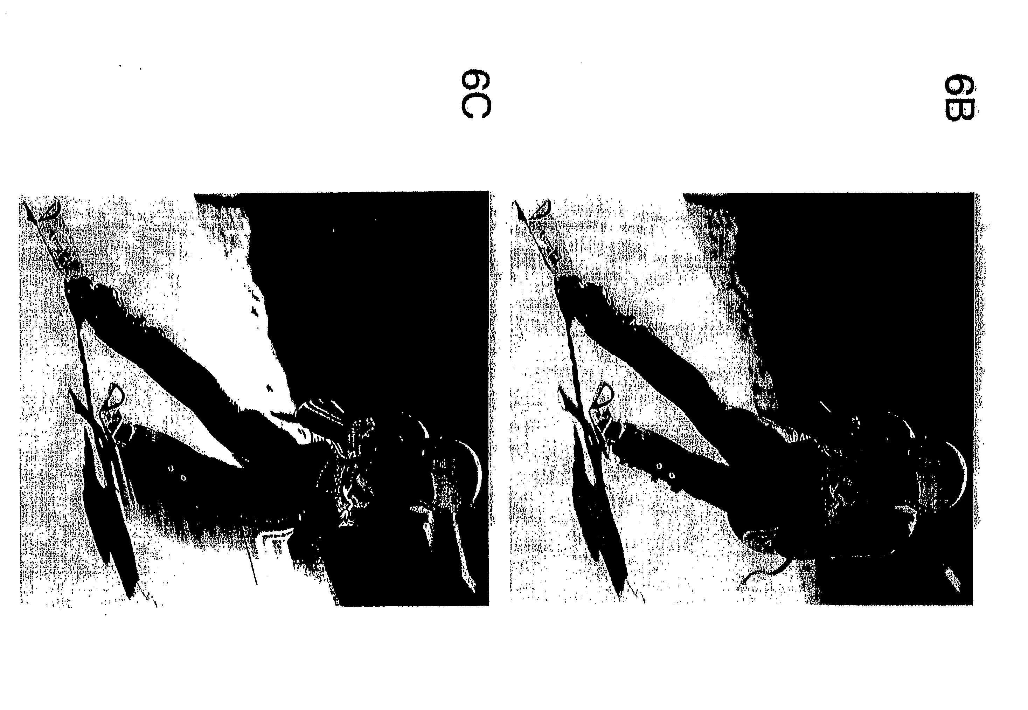

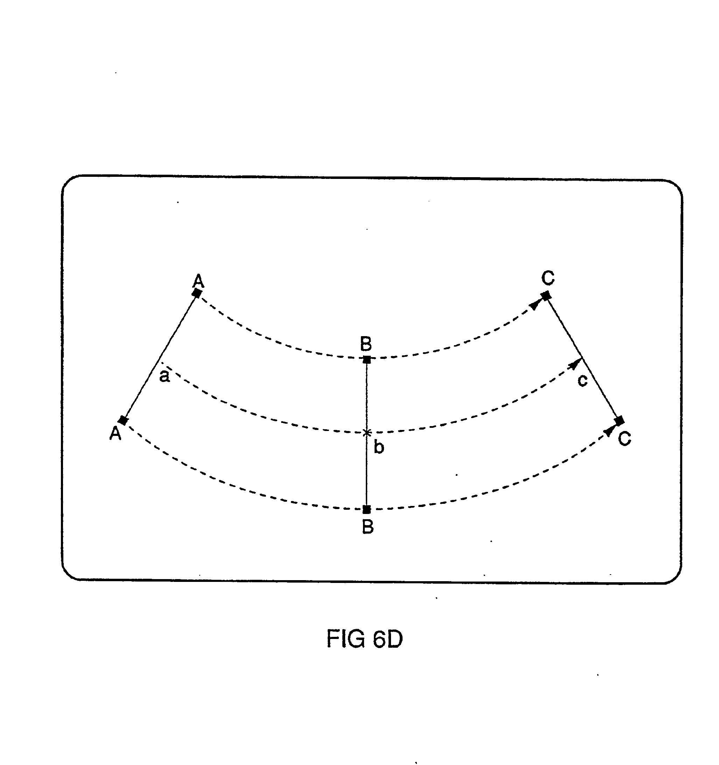

Pressing of the ALIGN CURSR key on the keypad of Fig. 1E and then pressing the yellow button first at a location "a" and then at a location "b" on the image moves the brush automatically in a straight line between locations A - A, defined along axis 30, and a corresponding selected location B-B elsewhere on the image, as illustrated in Fig. 6A, painting the vignette along the path. Alternatively, motion of the brush in a curved line may be provided. For example, as illustrated conceptually in Fig. 6D, the user may be allowed to select a plurality of locations "a", "b", "c", etc., and the system may operate so as to fit a curve, indicated in Fig. 6D as an arrow, to the selected plurality of locations, using conventional curve fitting method. The brush may then automatically move along the fitted curve, passing sequentially through brush positions A-A, B-B and C-C as shown.

Fig. 6C illustrates the results of using the automatic brush movement function, implemented herein using the ALIGN CURSR key, to retouch the unretouched photograph of Fig. 6B.

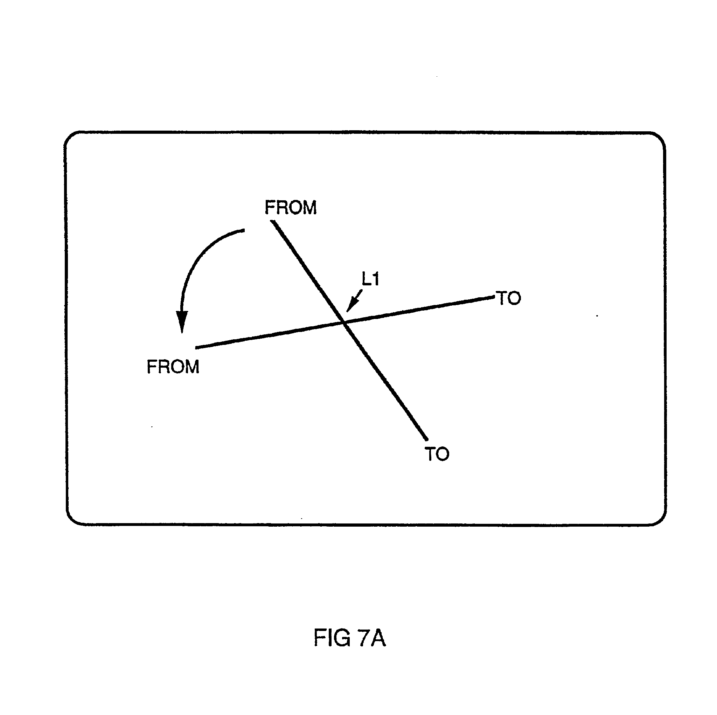

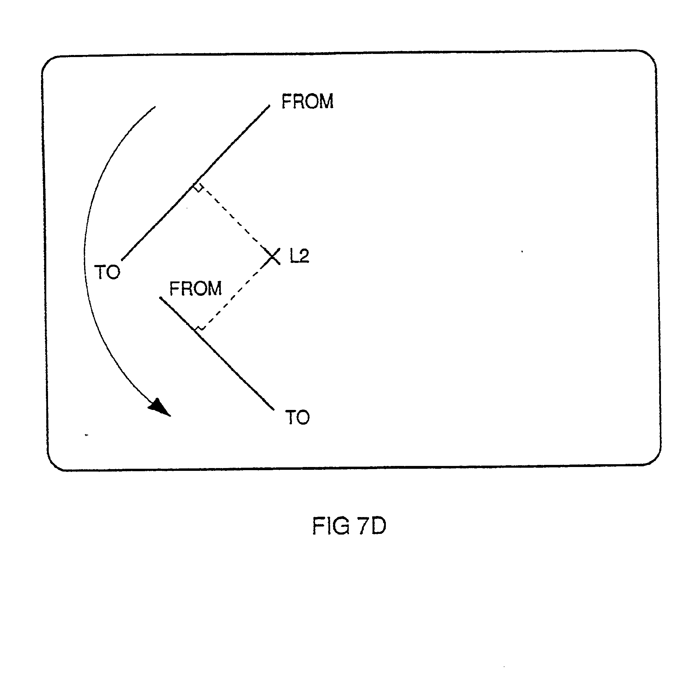

Rotation of the brush about a location defined along axis 30 is achieved by pressing the ROTAT BRUSH key on the keypad of Fig. 1E. The azimuthal extent of rotation may be governed by a rotatable input device, such as a dial forming part of workstation 10. It is noted that rotation may be provided about any location in the image. Fig. 7A illustrates positions of a brush at two points in time when the brush is rotated about a location $L_1$ along the brush axis. Fig. 7D illustrates positions of a brush at two points in time when the brush is rotated about a location $L_2$ which is not along the brush axis.

EP 0 455 351 A2

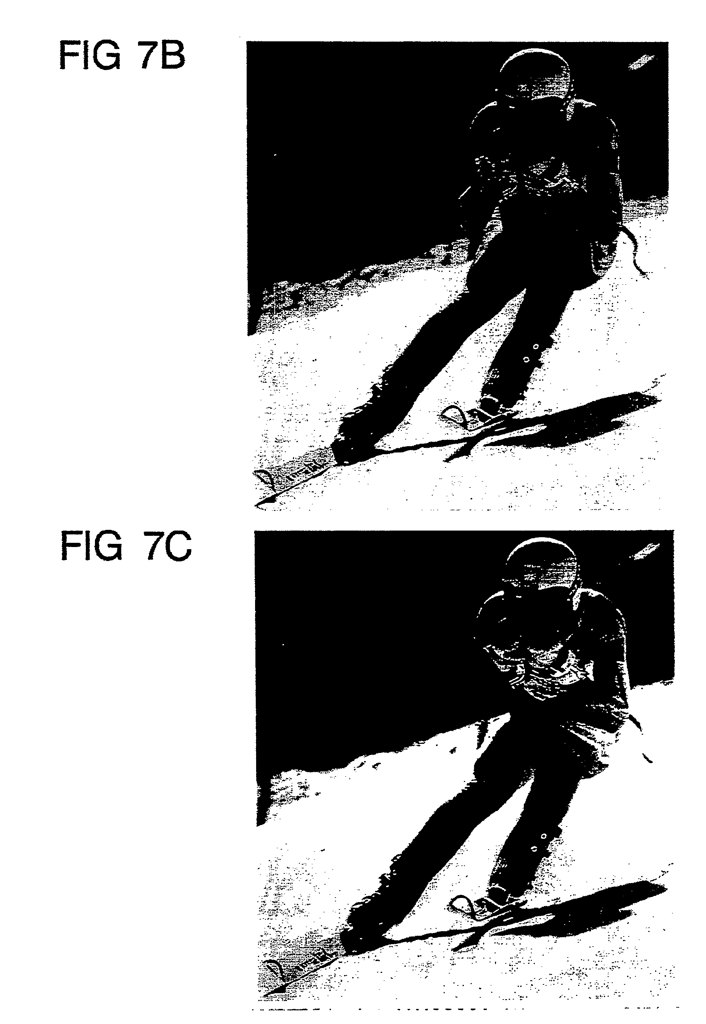

An example of retouching done in accordance with the brush rotation function described above may be seen by comparing the original photograph in Fig. 7B with the retouched photograph in Fig. 7C.

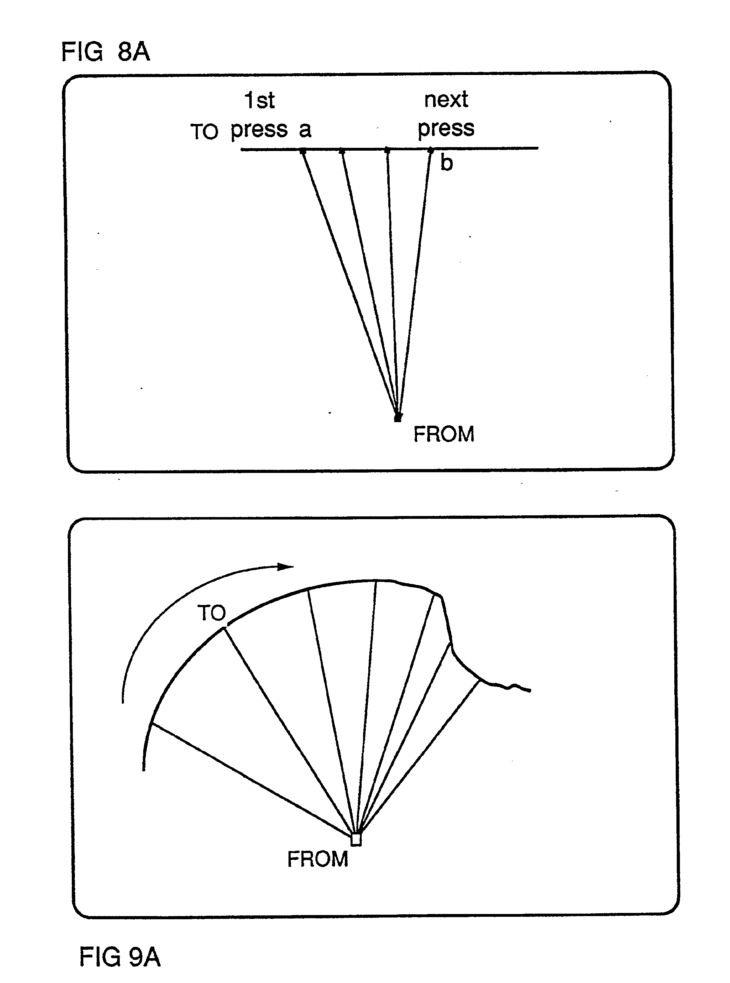

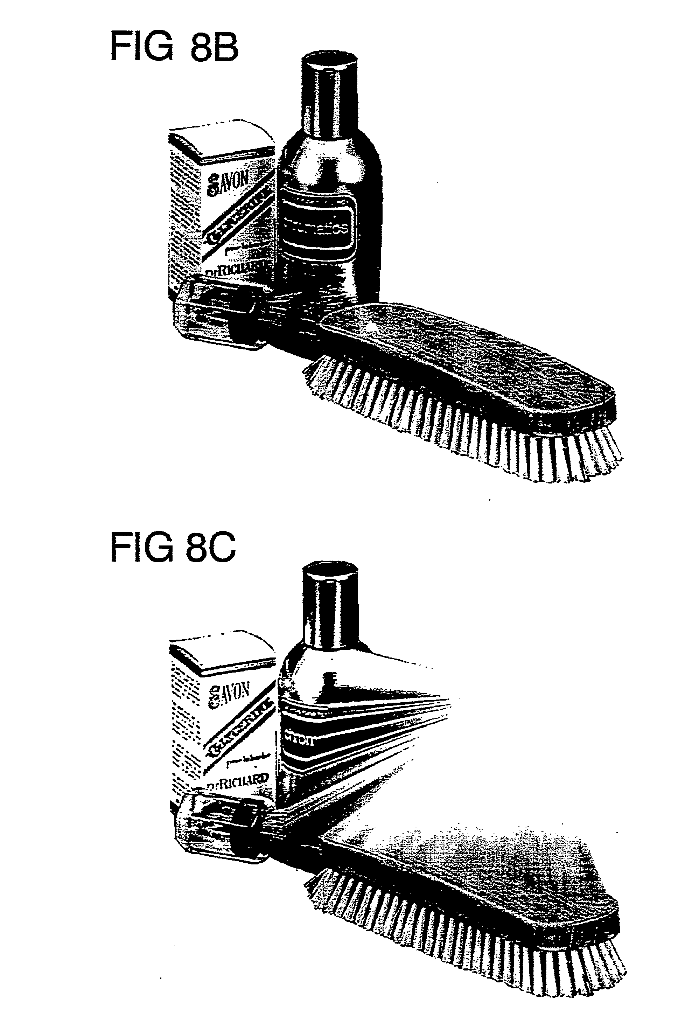

Rotation of the brush about the FROM location and terminating the other end of the brush stroke along a straight line is achieved by pressing the FIX FROM key and ALIGN CURSOR on the keypad of Fig. 1E, and then pressing a yellow button first at location "a" and then at location "b". Rotation of the brush, typically as illustrated in Fig. 8A, is provided automatically. An example of retouching done in accordance with the brush rotation function described above may be seen by comparing the original photograph in Fig. 8B with the retouched photograph in Fig. 8C.

Rotation of the brush about the FROM location and terminating the other end of the brush stroke along an arbitrary pattern is achieved by pressing the FIXED FROM key on the keypad of Fig. 1E, and then pressing the yellow buttom continuously while moving the TO point along an arbitrary pattern, using the mouse. Rotation of the brush, typically as illustrated in Fig. 9A, is provided.

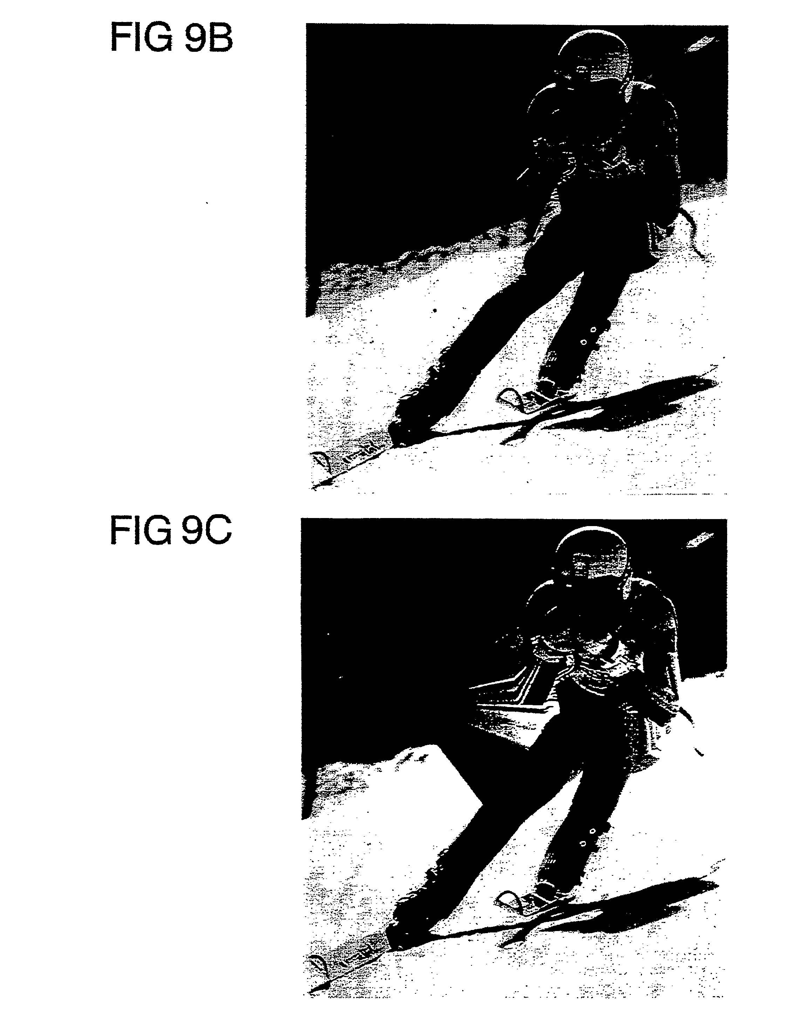

An example of retouching done in accordance with the brush rotation function described above may be seen by comparing the original photograph in Fig. 9B with the retouched photograph in Fig. 9C.

A typical flowchart for drawing a vignette between two points for one color separation is set forth in Annex B.

It is appreciated that the particular embodiment of the invention shown and described above is merely exemplary and for the purposes of illustration and is not intended to be limiting. The described embodiment is intended to include an apparatus and method whereby first and second relative locations are defined by the user. More generally, the "first location" may be a first linear or curved array of relative locations, which may or may not coincide and may or may not be adjacent, and the "second location" may be a second linear or curved array of relative locations which respectively correspond to the relative locations of the "first location" and which may or may not coincide and may or may not be adjacent. If the first or second location is a curved array, the curve defined by the array may be either a closed curve, such as a circle, or an open curve.

A color value of each individual relative location in at least the first or alternatively both arrays is user-selected or alternatively is determined as a function, normally predetermined, of the individual relative location or of a neighborhood of the individual relative location. The neighborhood of the individual relative location may have any suitable predetermined or user selected size and shape.

A brush axis or axes are defined which join each individual relative location, termed herein a FROM location, within the first array of relative locations to the corresponding individual location, termed herein a TO location, within the second array of relative locations. The brush axes, if plural, may be parallel to one another, in the sense of equidistance at corresponding points along the paths. Alternatively, the brush axes may not be parallel, for example when the relative locations of the first array coincide. The brush axis or axes may be linear or curved. A "thickness" is defined for the brush axis or axes. More generally, a thickness is defined for each point along each brush axis so that the thickness of a particular brush axis may vary along that brush axis. The thickness at each point along a brush axis is defined in a direction perpendicular to the tangent to the brush axis at that point.

A gradient function, user-selected or predetermined, is defined along each brush axis. The gradient function is characterized in that the value thereof at the TO location is the color value of the TO location and, if a FROM location color value is defined, the value of the gradient function at the FROM location is the color value of the FROM location. The gradient function may or not be monotonic, may or may not be continuous, and may or may not be linear.

The first and second arrays of relative locations, the color values thereof, the brush axis or axes, the thickness or thicknesses thereof and the gradient function or functions defined therealong together define a "brush" which is operative as follows: An Initial brush position within a color image is defined which corresponds to the first array of relative locations. The final brush position within the color image is defined by the second array of relative locations. In other words, the initial brush position defines a first array of actual locations within the color image and the final brush position defines a second array of actual locations within the color image.

The brush operation comprises assigning a new color value to each point of the image which falls along the axis or axes of the brush, or close enough to an axis of the brush to be included in the brush due to the thickness of that axis. The new color value is assigned to the point in accordance with the value of the gradient function at that point. The final color value of each point along each brush axis may be the new color value or alternatively may be a suitable combination of the new color value and the original color value, thereby to provide a "ghosting" or "transparency" effect.

A brush may be moved by performing the following steps:

a. Determining the path along which the brush moves:

Determining a first sequence of first arrays of actual locations within the image, some of which first arrays may coincide with one another, as in brush rotation, and a corresponding second sequence of second arrays

9

of actual locations within the image, some of which second arrays may coincide with one another. It is appreciated that determining a single location within the first array generally determines the entire first array, and determining a single location within the second array generally determines the entire second array. If the first and second arrays are of equal configuration, determining a single location within the first array generally determines the entire first and second arrays of actual locations. Therefore, one way of enabling a user to define a path is to enable the user to define one or two sequences of single actual locations within the color image, and to define one or two corresponding relative locations along the brush which are to "move along" the path defined by the sequence/s of single actual locations.

It is appreciated that a brush path, or sequences of first and second arrays, may be user-defined in any suitable manner. For example, if the user is limited to selection of a linear brush path, it is sufficient to obtain a user's indication of the beginning and end points of the path. If the brush path may be, curved, the user may indicate the curve of the path by moving a cursor along the appropriate portions of the color image Alternatively, the user may indicate a plurality of points along the desired curve and a conventional curve-fitting function may be employed to determine the desired curve.

b. Defining the brush: as shown and described above. Although in the implementation described above, the brush is defined once and then remains unchanged as it moves along its path, this need not be the case. Instead, one or more brush parameters, such as parameters of the first and second arrays of relative locations, parameters of the color values thereof, parameters of the brush axis or axes such as the thickness or thicknesses thereof and the gradient function or functions defined therealong, may be defined by the user as varying as the brush moves along its path.

This may be operationalized by receiving a plurality of user inputs, each indicating a position of the brush and the parameters of the brush at that position. A curve is then fitted to the plurality of indicated positions and the brush is then moved along the curve, the indicated parameters of the brush varying generally continuously as the brush moves.

c. Translating the brush: Operating the brush for each pair of first and second arrays in the corresponding first and second sequences. In other words, the brush is first operated such that the FROM location is the first array in the first sequence and the TO location is the first array in the second sequence. Next, the brush is operated such that the FROM location is the second array in the first sequence and the TO location is the second array in the second sequence. Subsequently, the brush is operated such that the FROM location is the third array in the first sequence and the TO location is the third array in the second sequence, and so on.

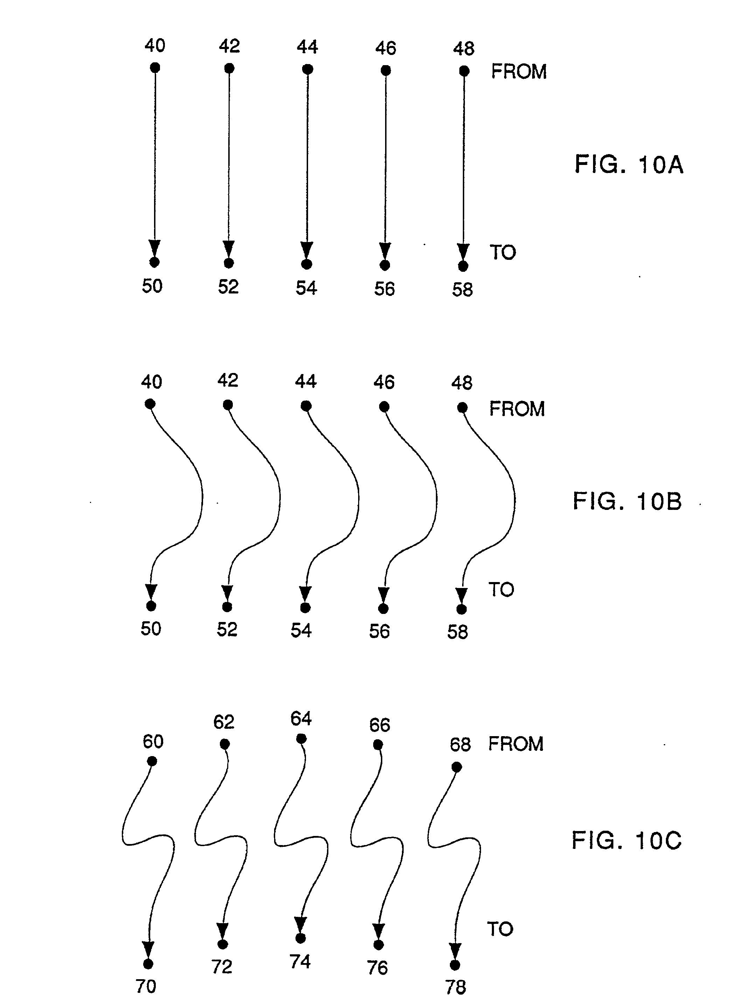

Sample brush types are conceptually illustrated in Figs. 10A-10F.

Reference is made specifically to Fig. 10A which conceptually illustrates a linear FROM array comprising five pixels 40, 42, 44, 46 and 48, a corresponding linear TO array comprising five respectively corresponding pixels 50, 52, 54, 56 and 58, and linear mutually parallel brush axes joining the corresponding pixels.

In Fig. 10B, curved mutually parallel brush axes join the corresponding pixels.

Fig. 10C conceptually illustrates a curved FROM array comprising five pixels 60, 62, 66, 66 and 68, a corresponding curved TO array comprising five respectively corresponding pixels 70, 72, 74, 76 and 78, and curved mutually parallel brush axes joining the corresponding pixels.

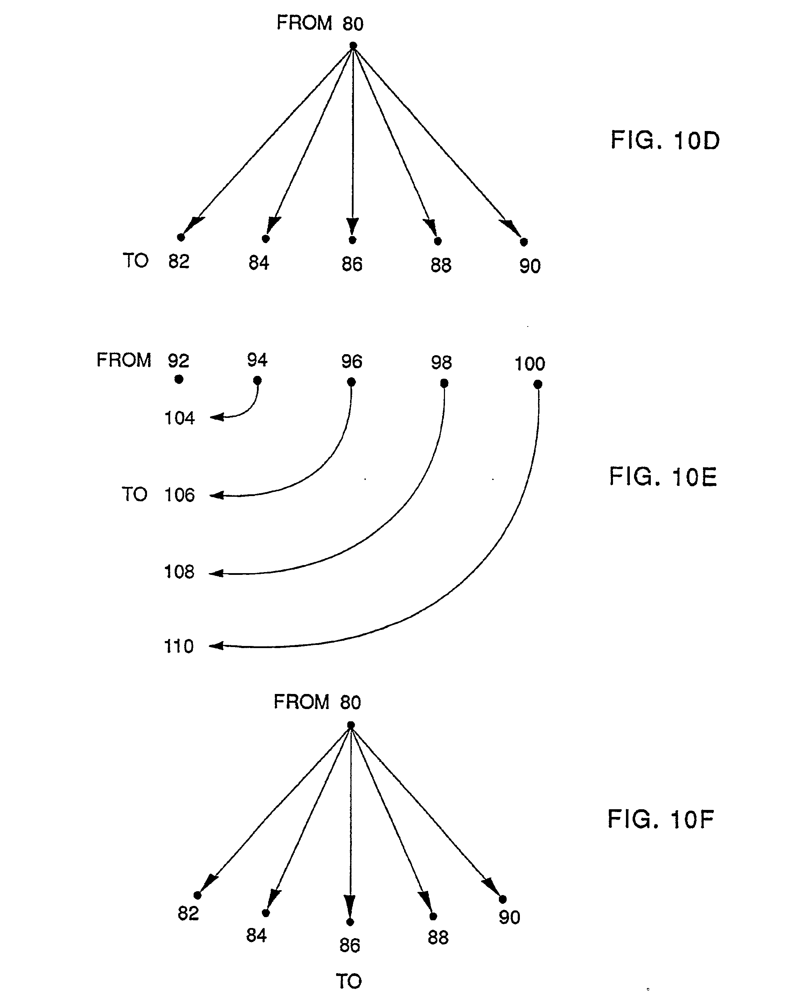

Fig. 10D conceptually illustrates a FROM array in which five FROM locations coincide in a single pixel 80 and a corresponding linear TO array comprising five pixels 82, 84, 86, 88 and 90. Linear non-parallel brush axes join corresponding locations. It is appreciated that pixel 80 corresponds to all five of the TO pixels.

Reference is now made to Fig. 10E which conceptually illustrates a linear FROM array comprising five pixels 92, 94, 96, 98 and 100, a corresponding linear TO array comprising five respectively corresponding pixels 92, 104, 106, 108 and 110 and curved mutually parallel brush axes joining the corresponding pixels. It is noted that the linear FROM array and the linear TO array have a pixel in common: pixel 92.

Fig. 10F is similar to Fig. 10D, but the TO array is curved rather than linear.

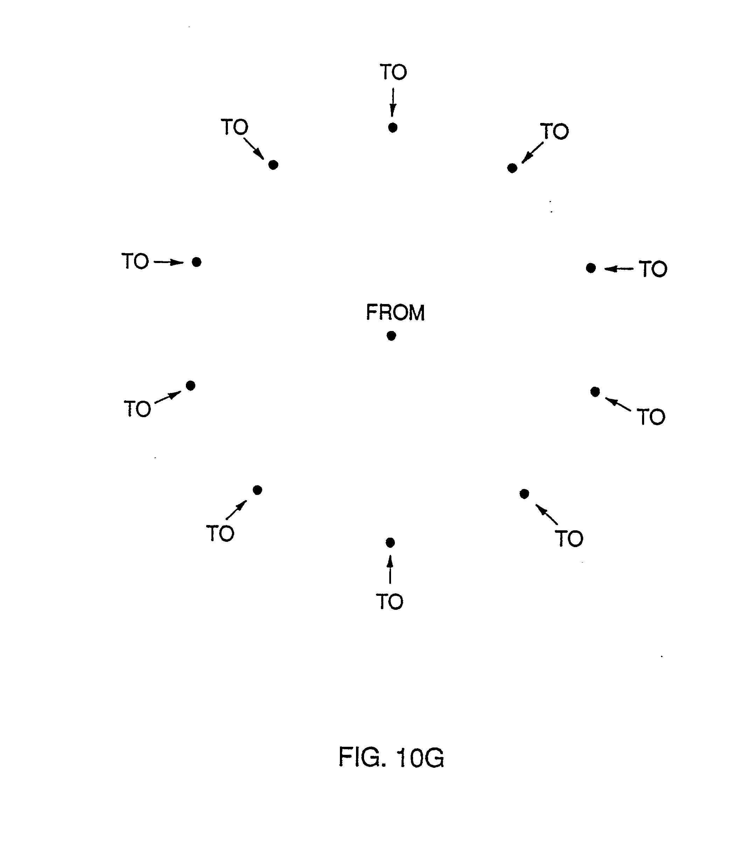

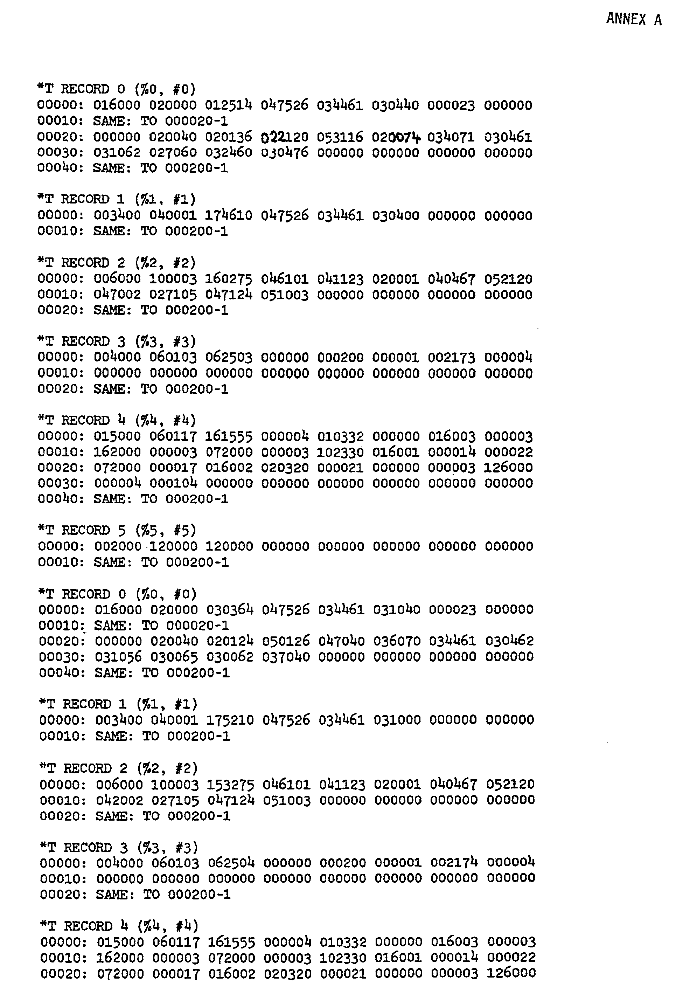

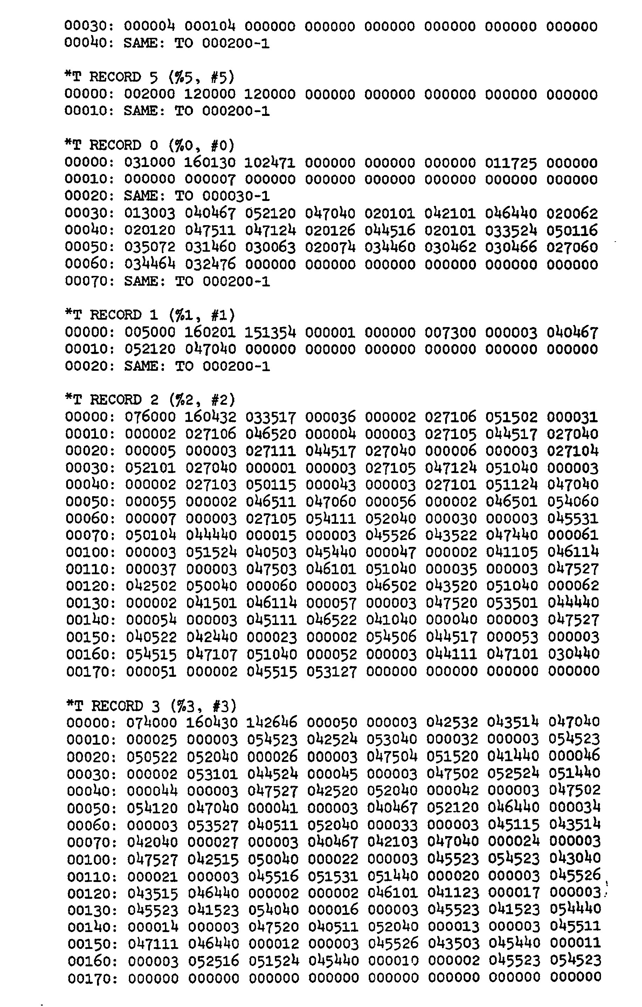

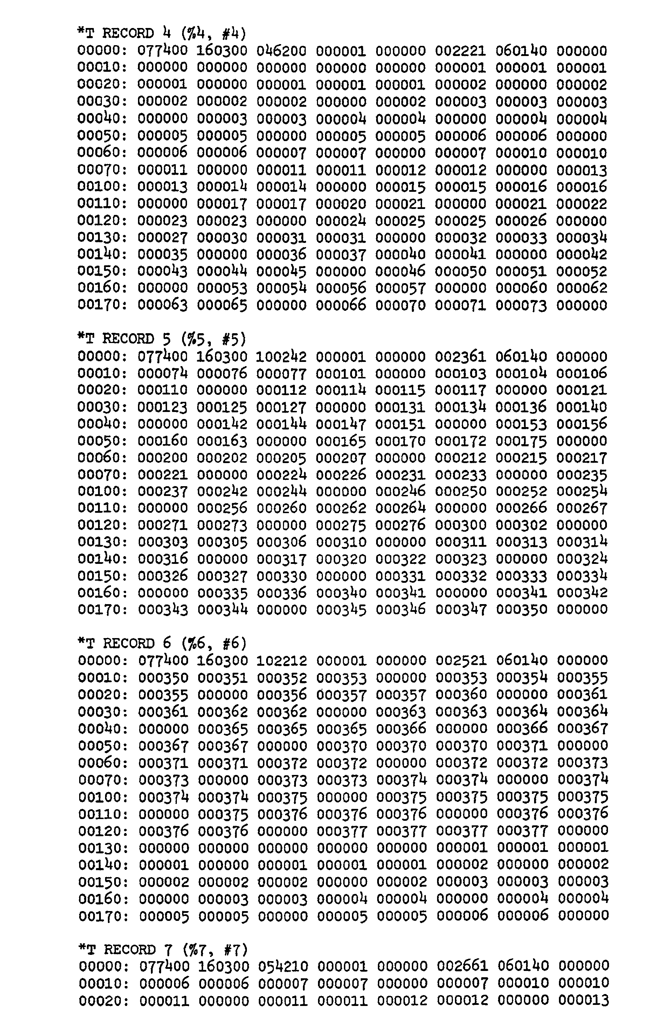

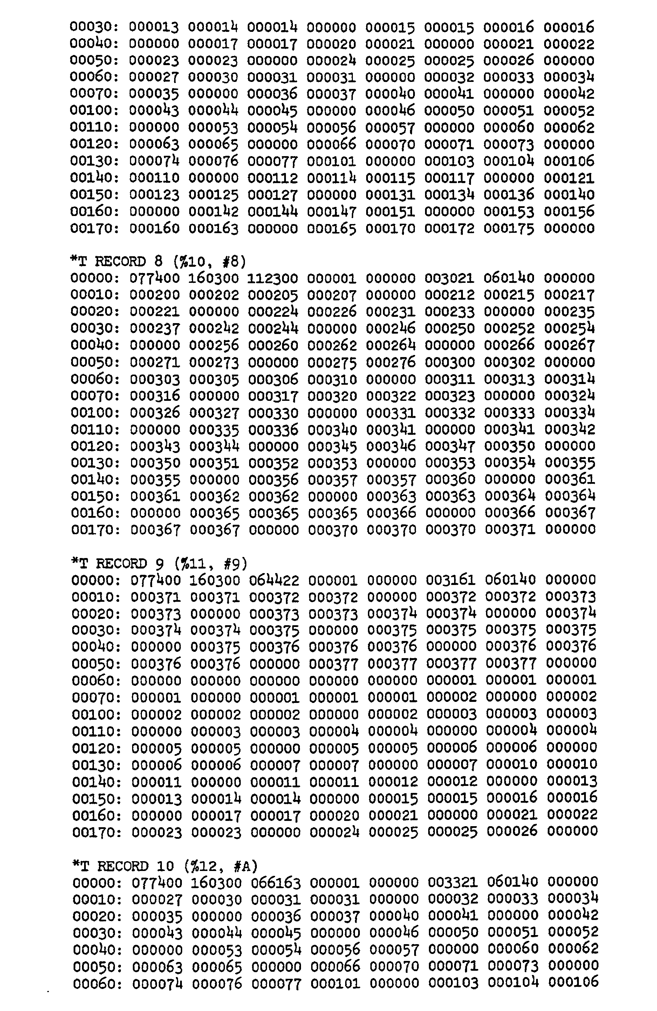

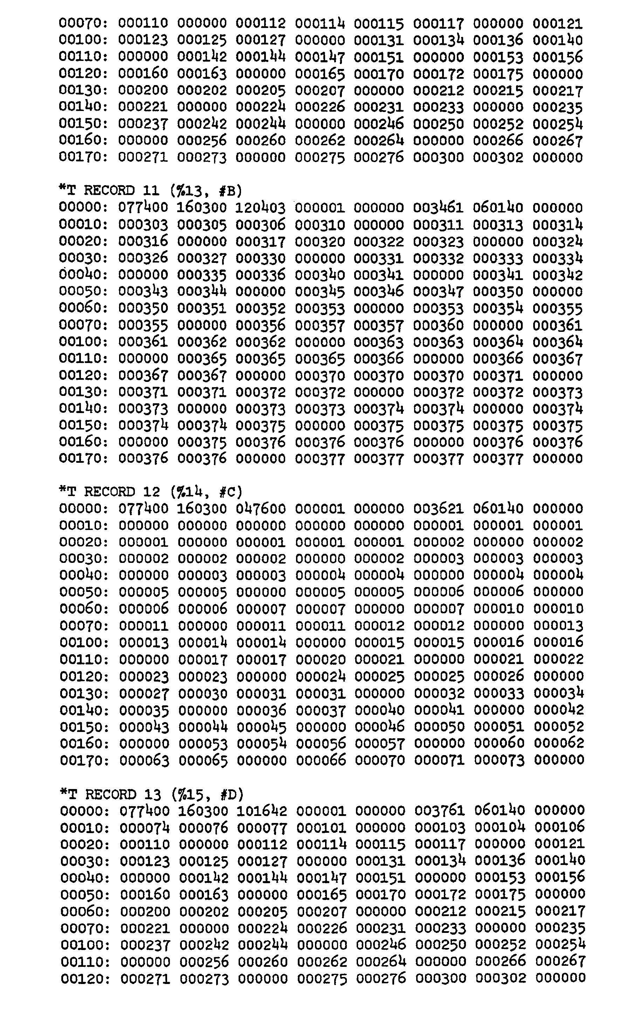

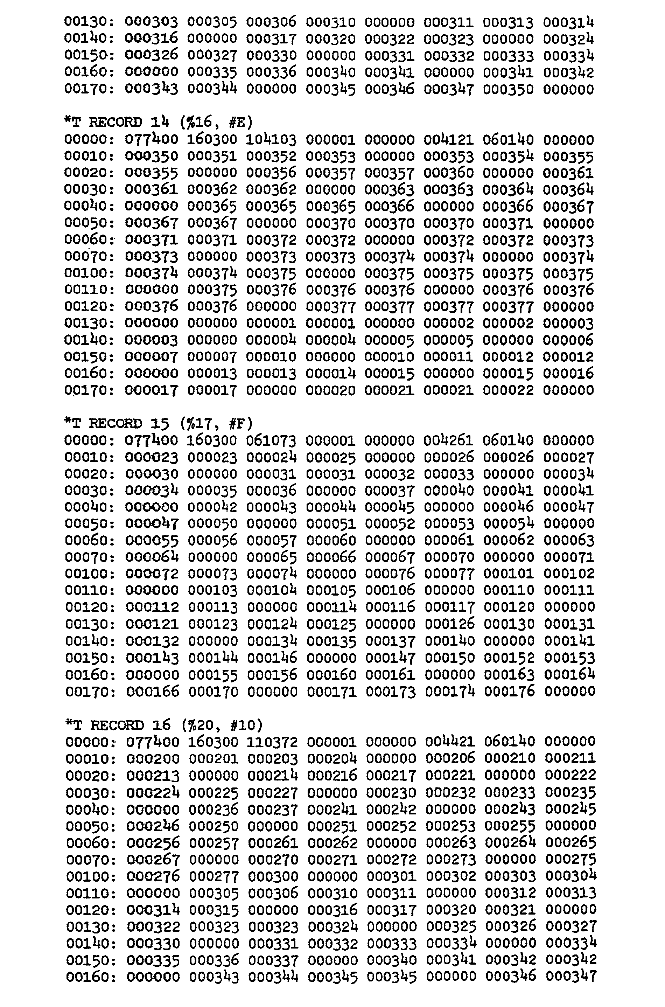

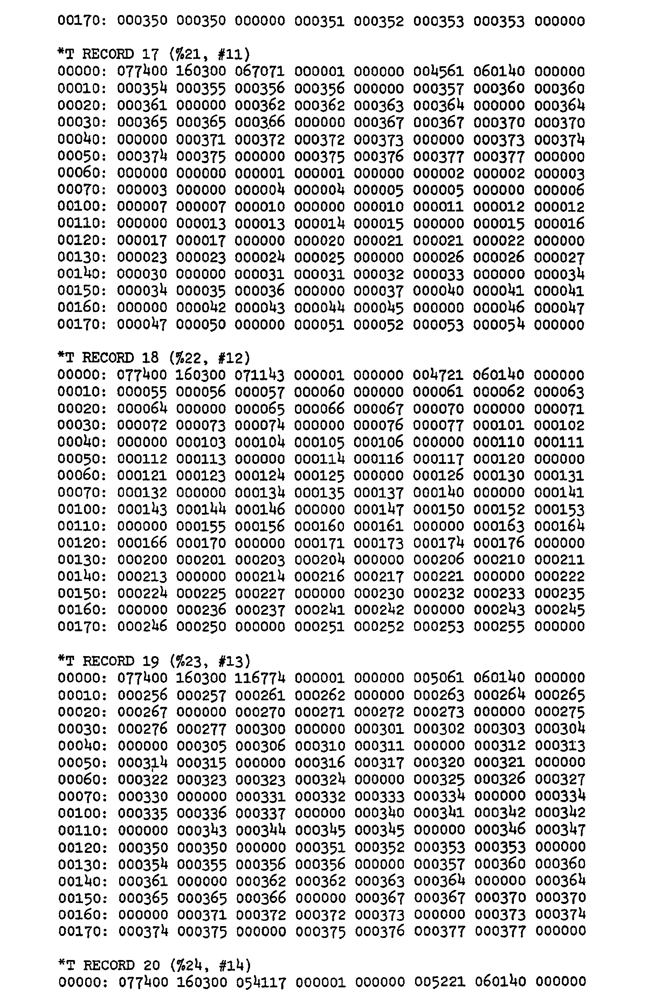

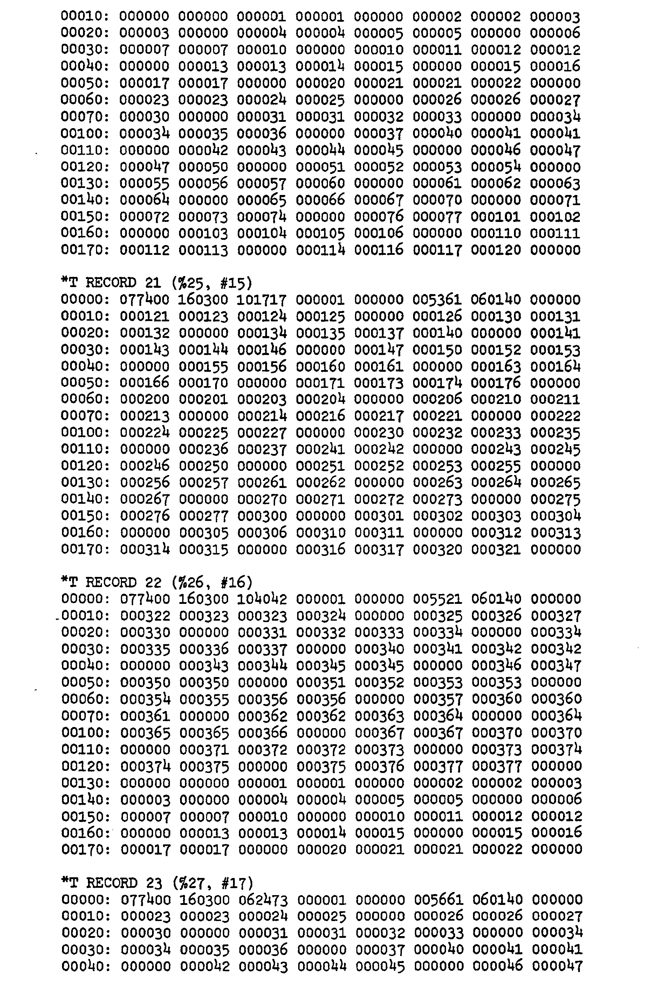

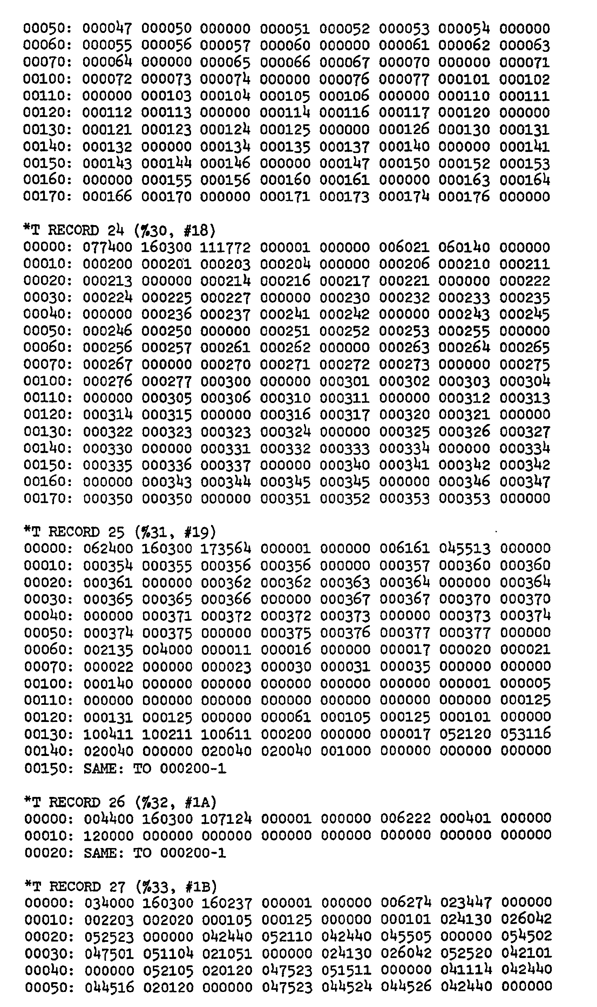

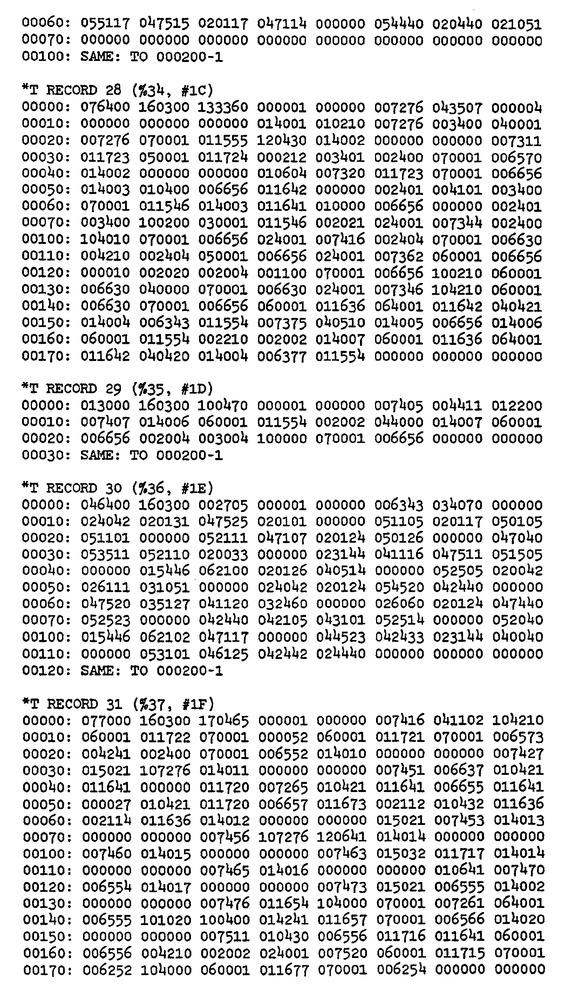

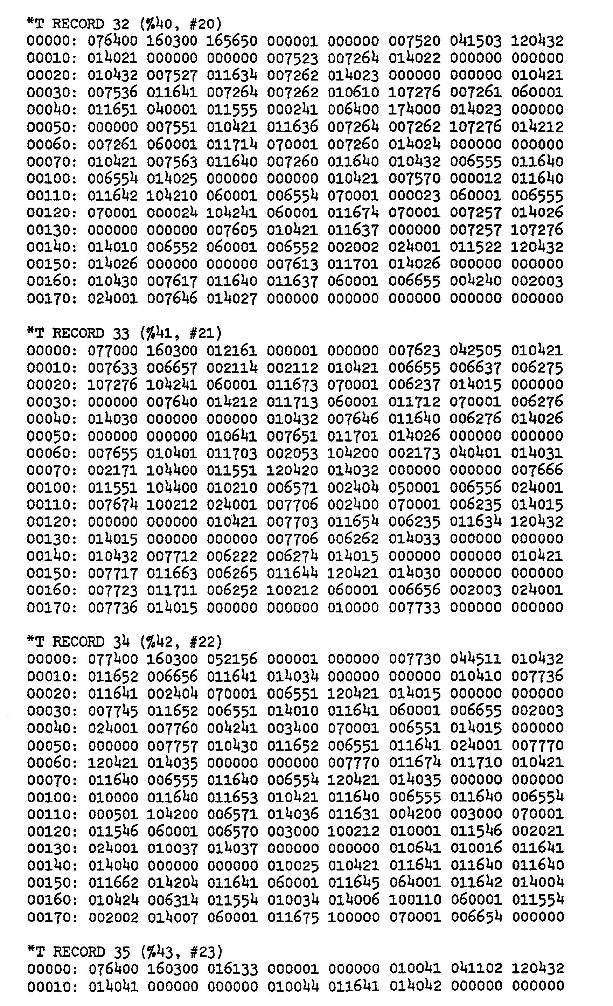

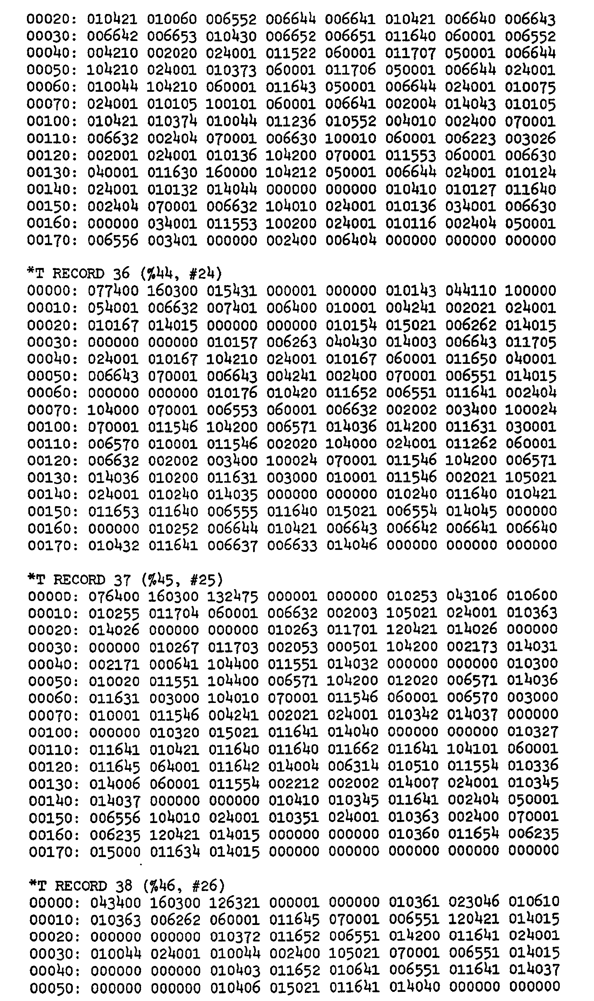

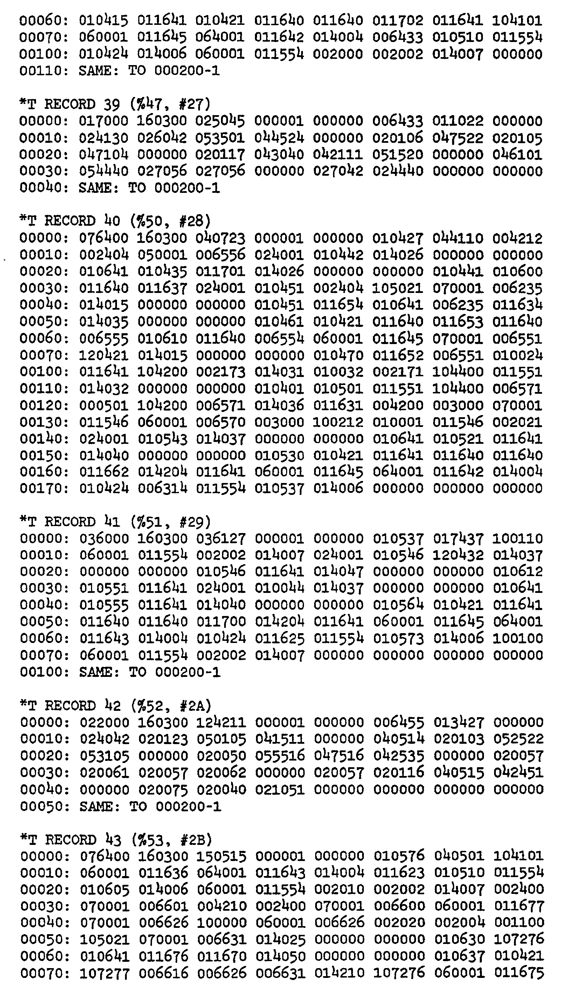

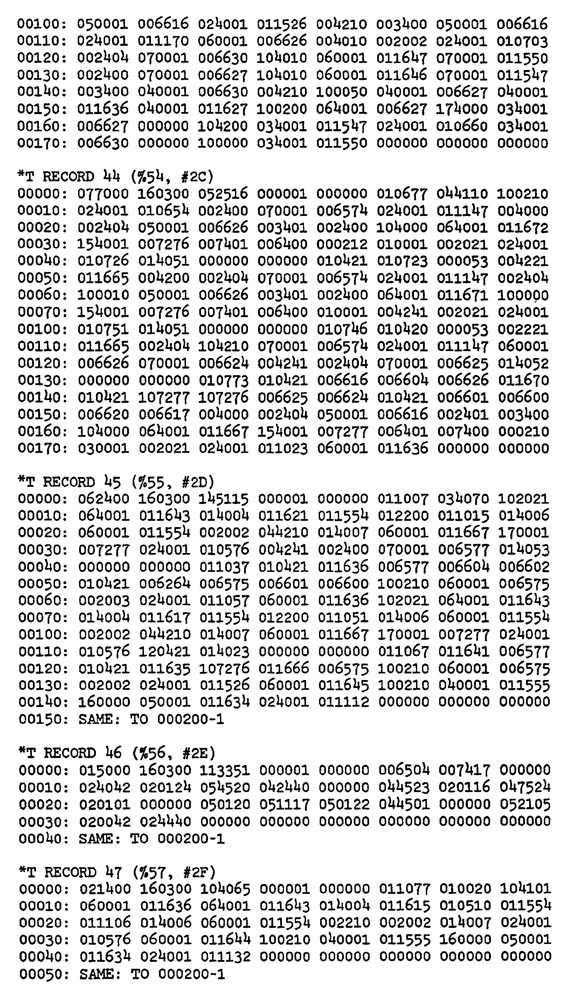

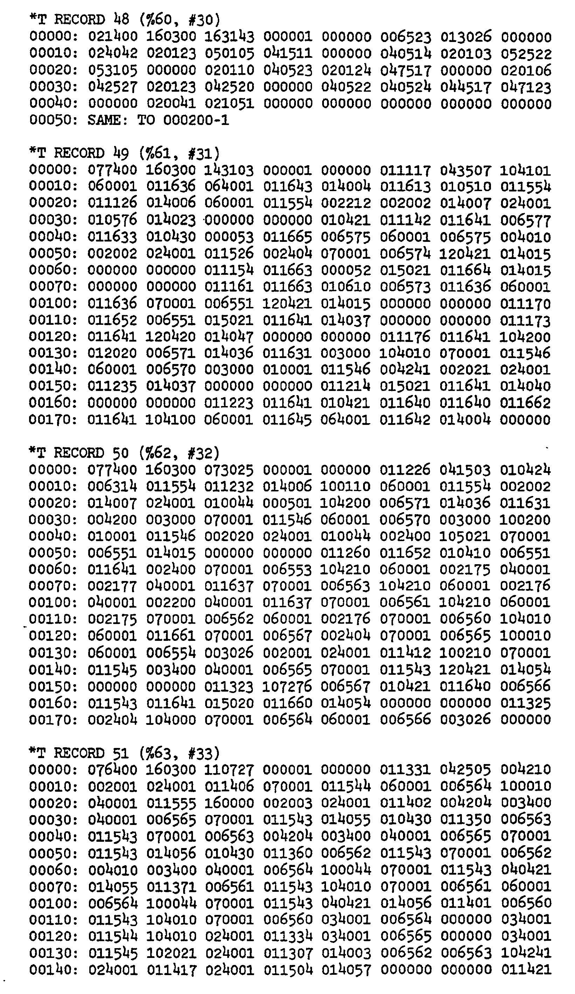

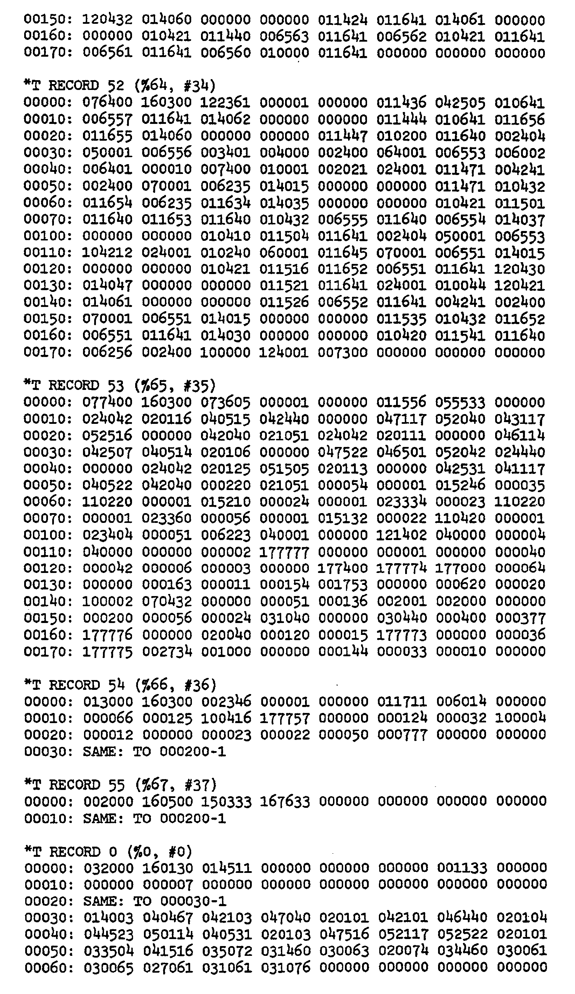

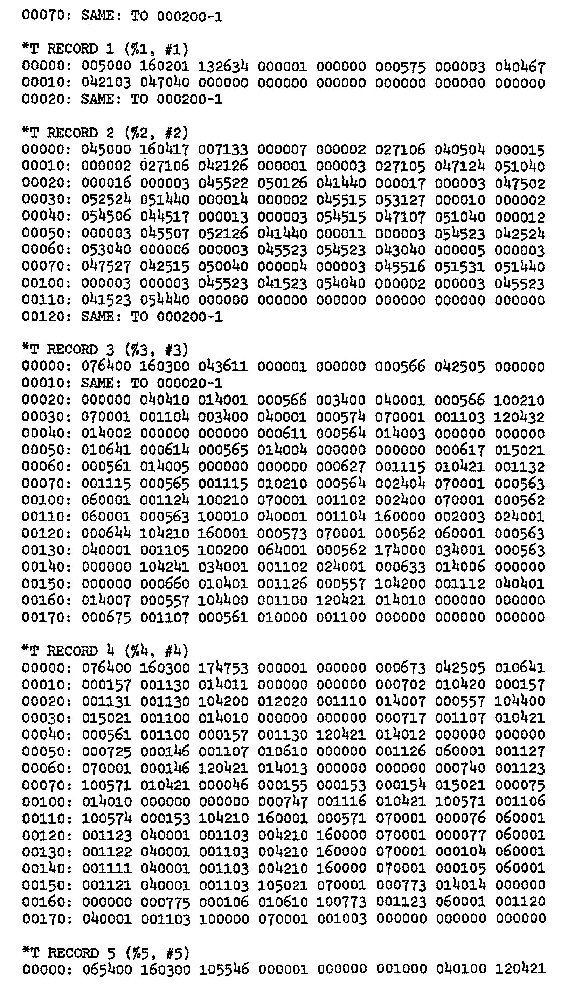

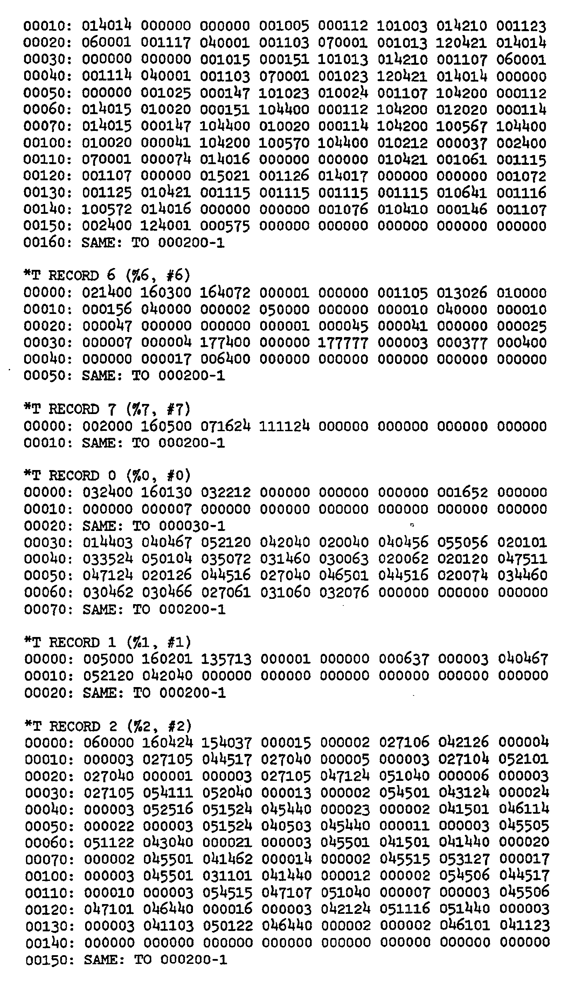

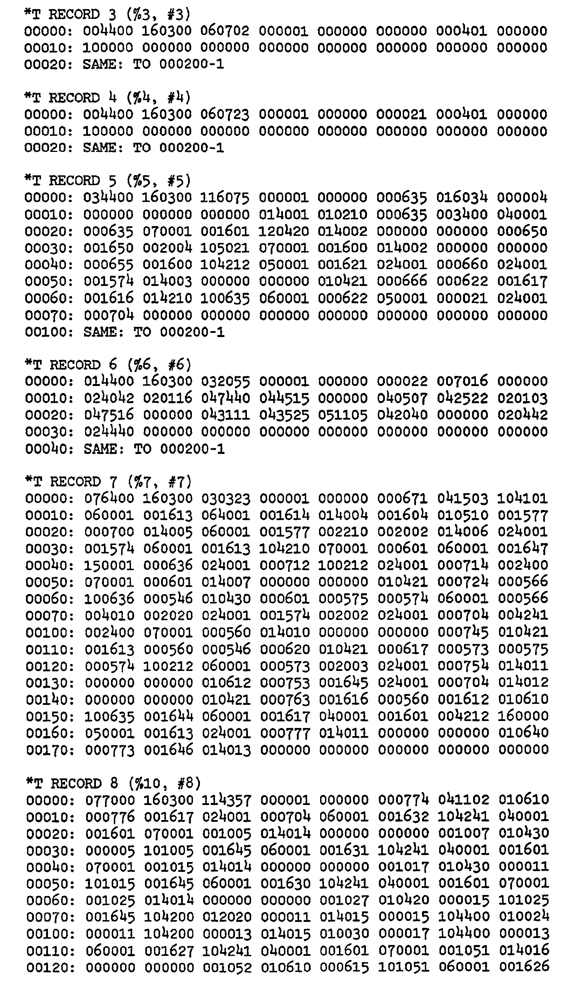

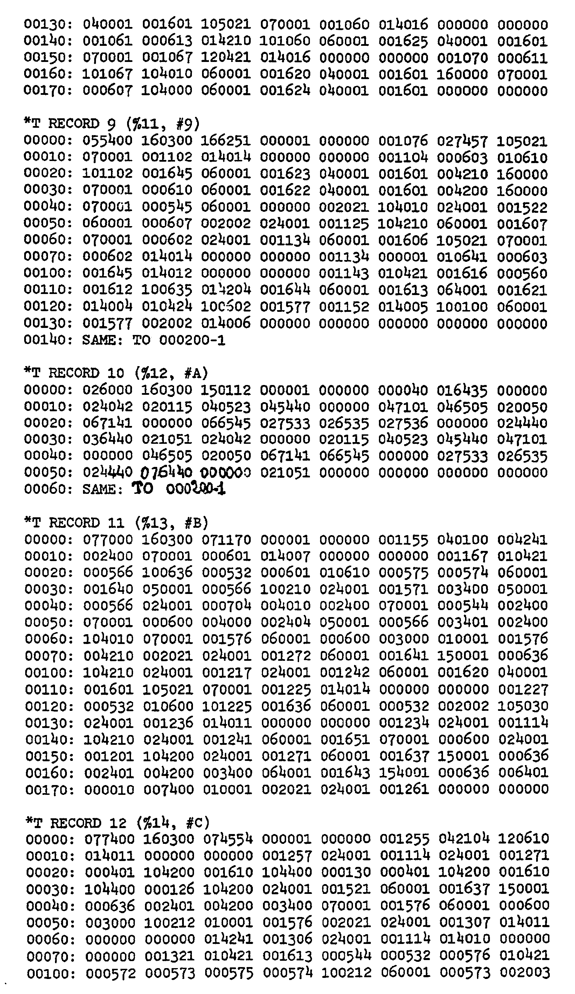

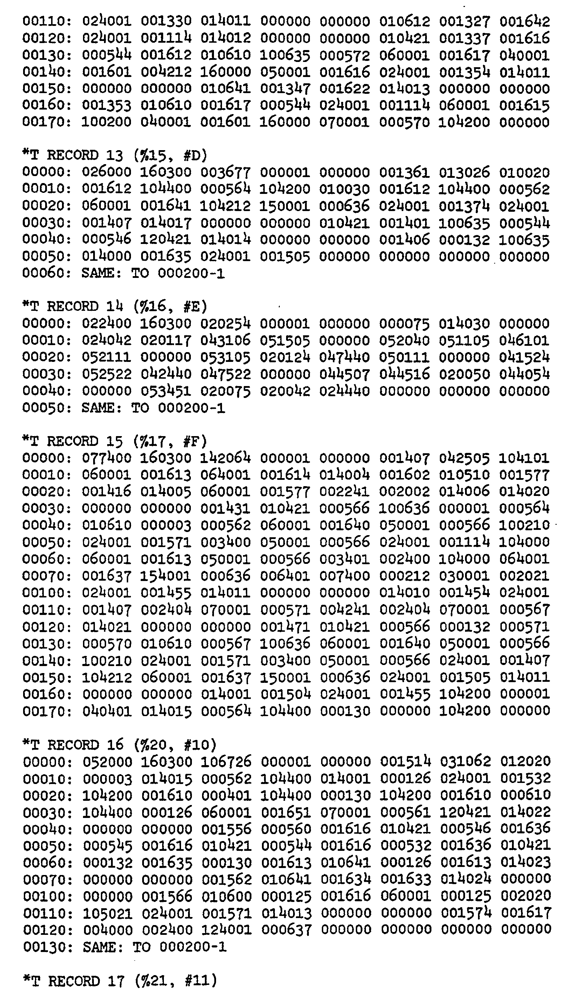

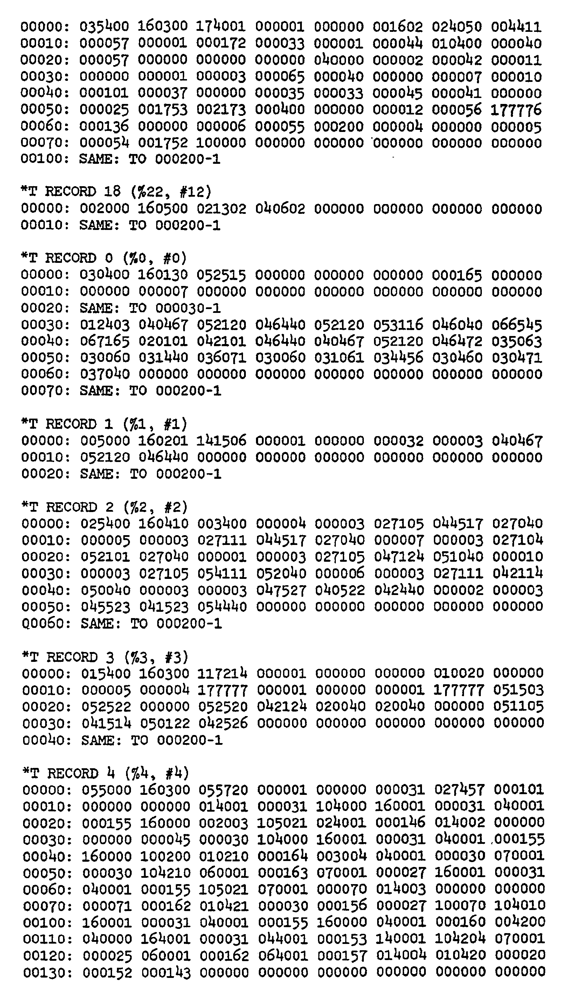

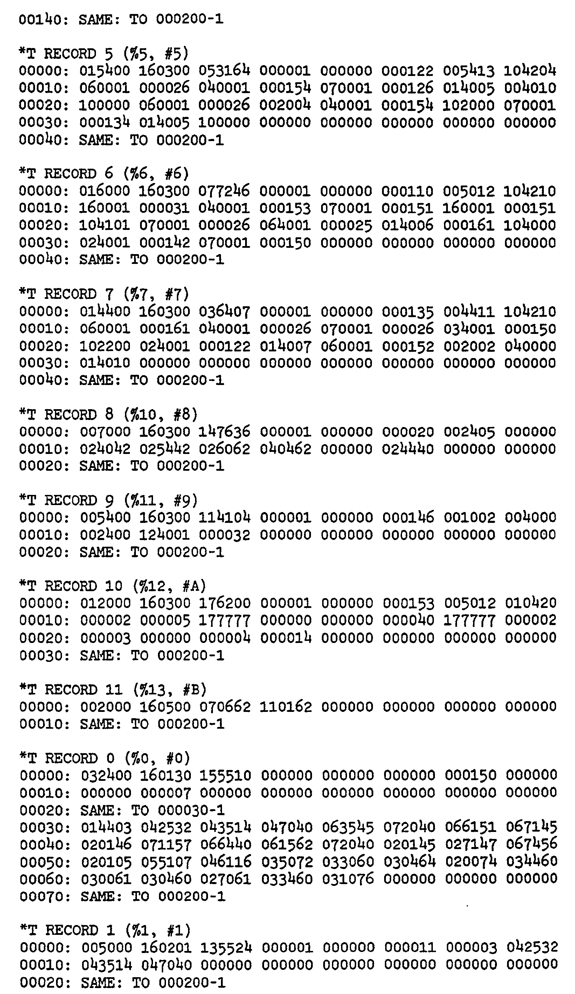

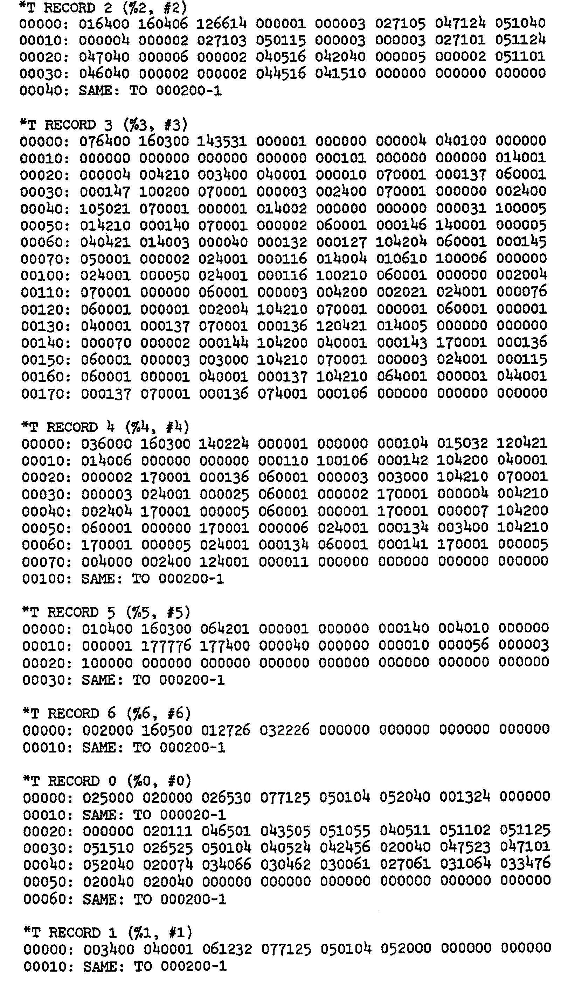

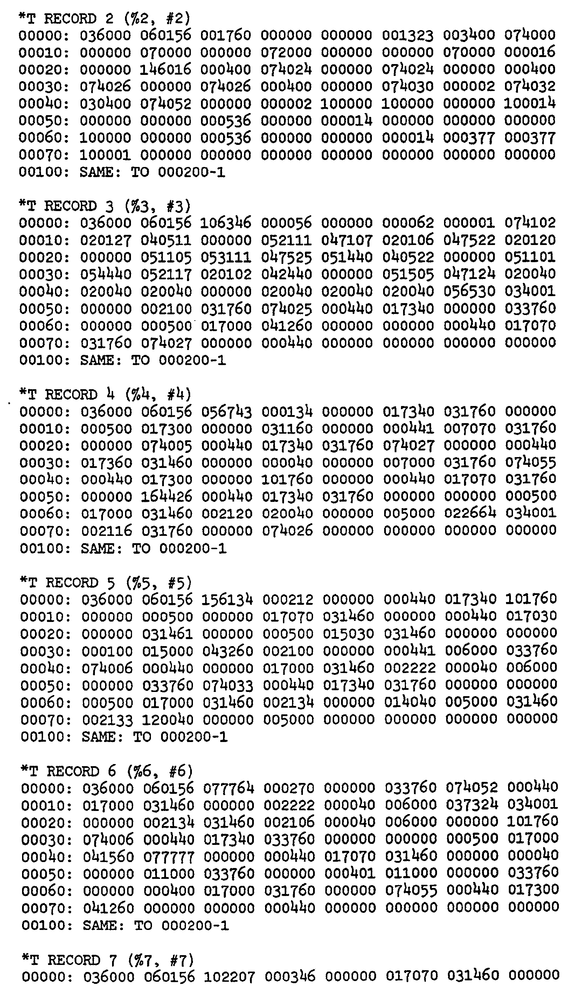

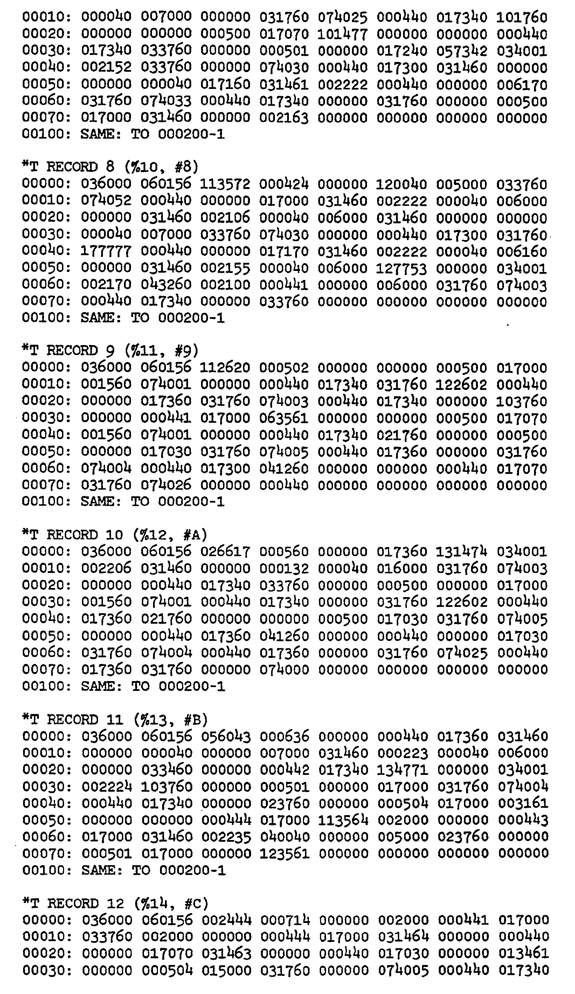

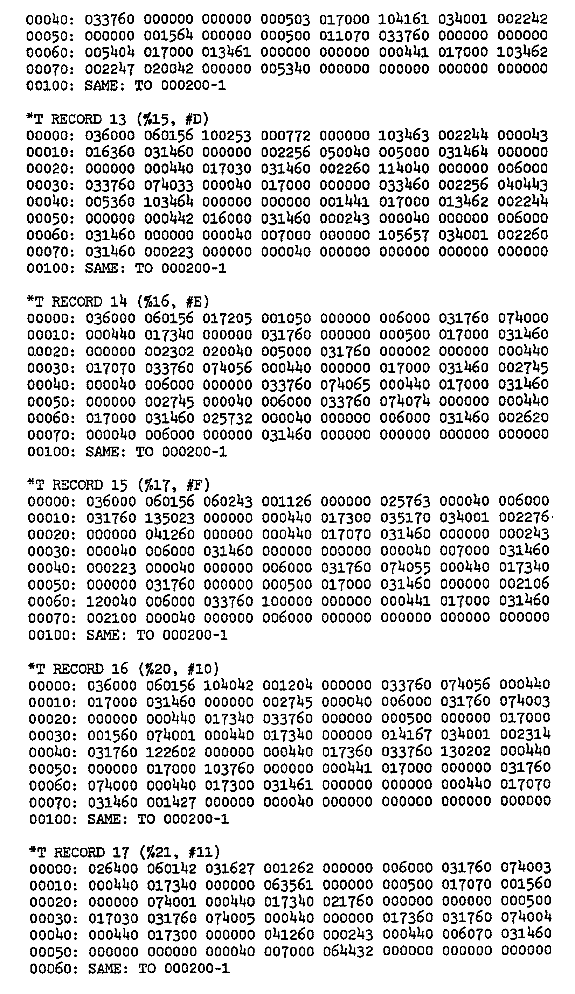

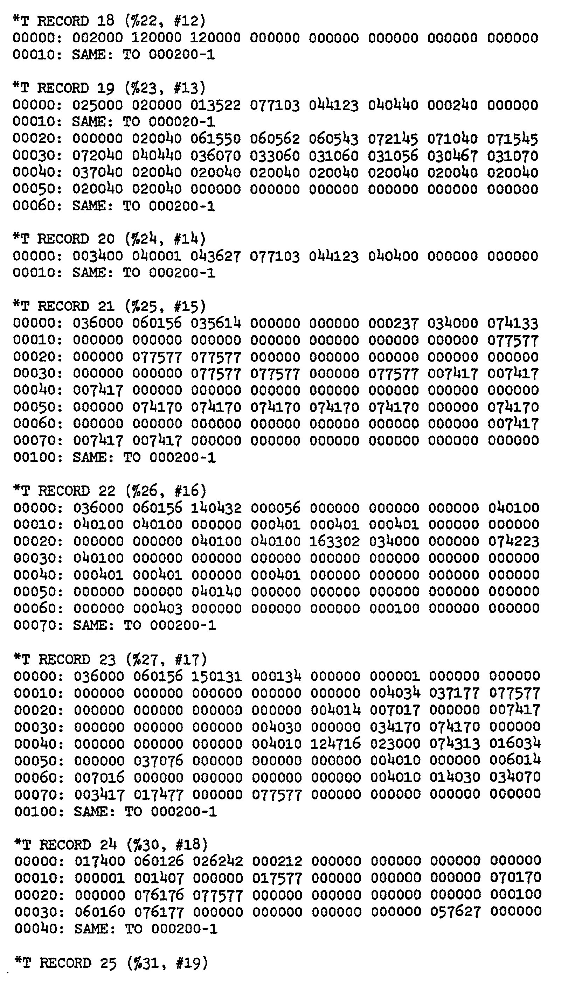

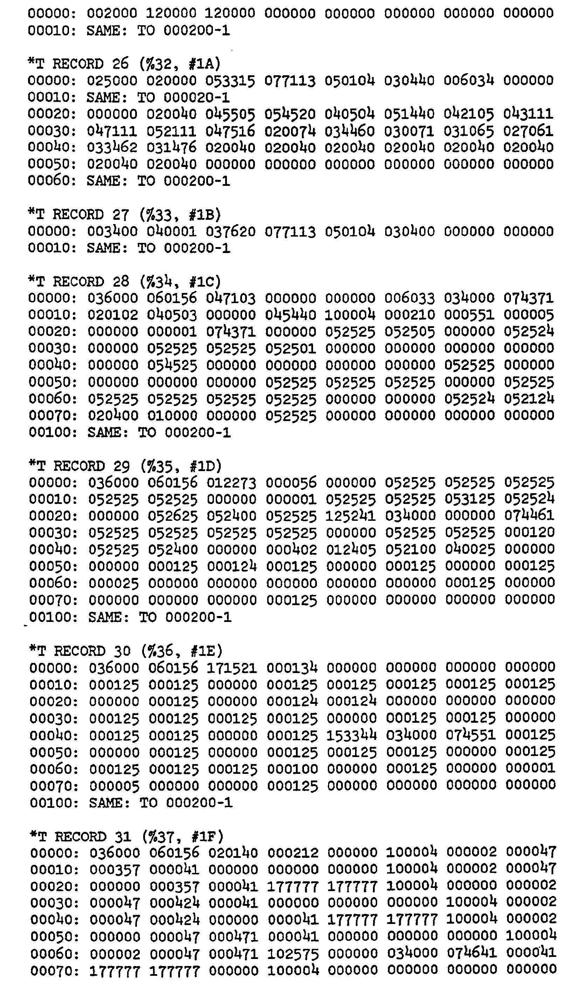

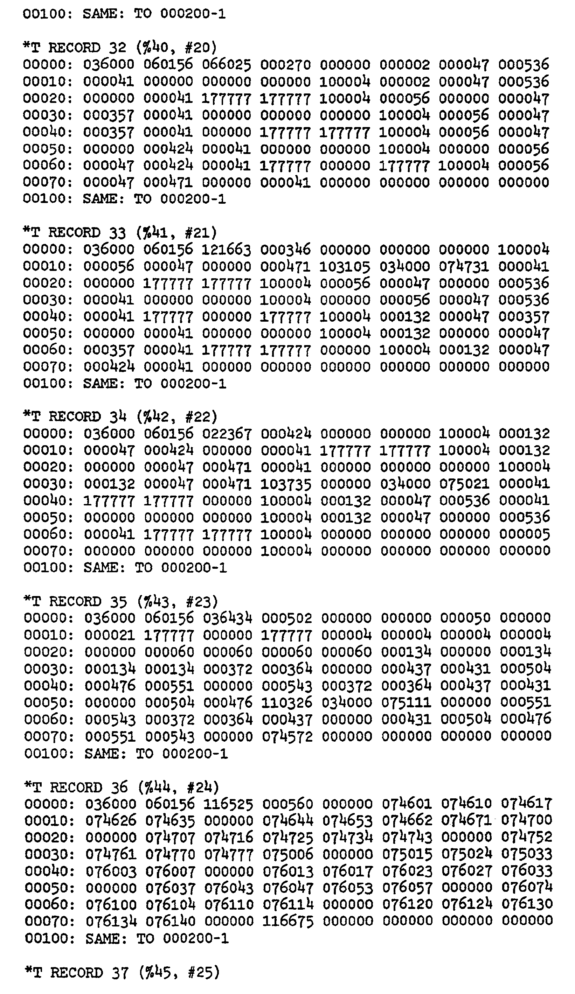

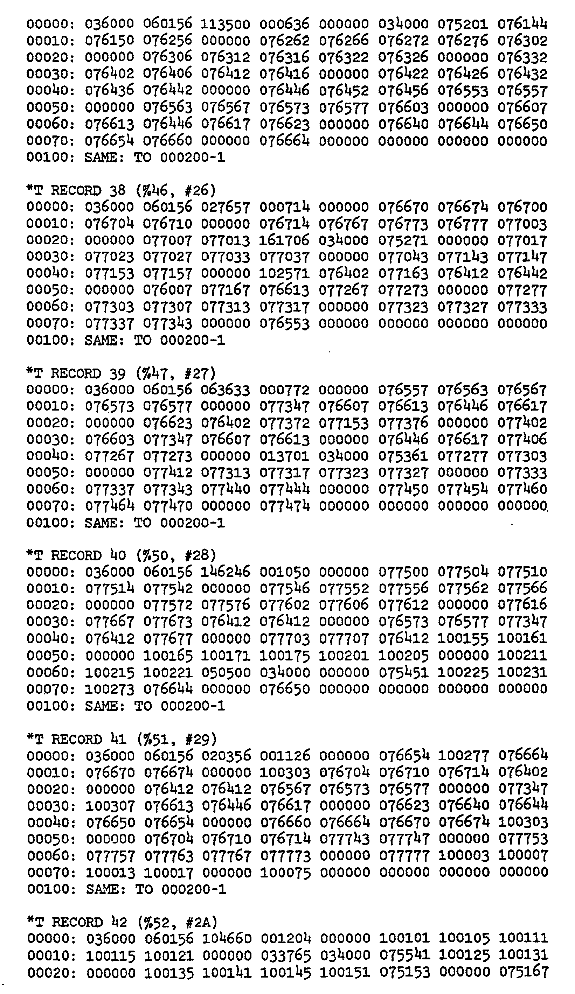

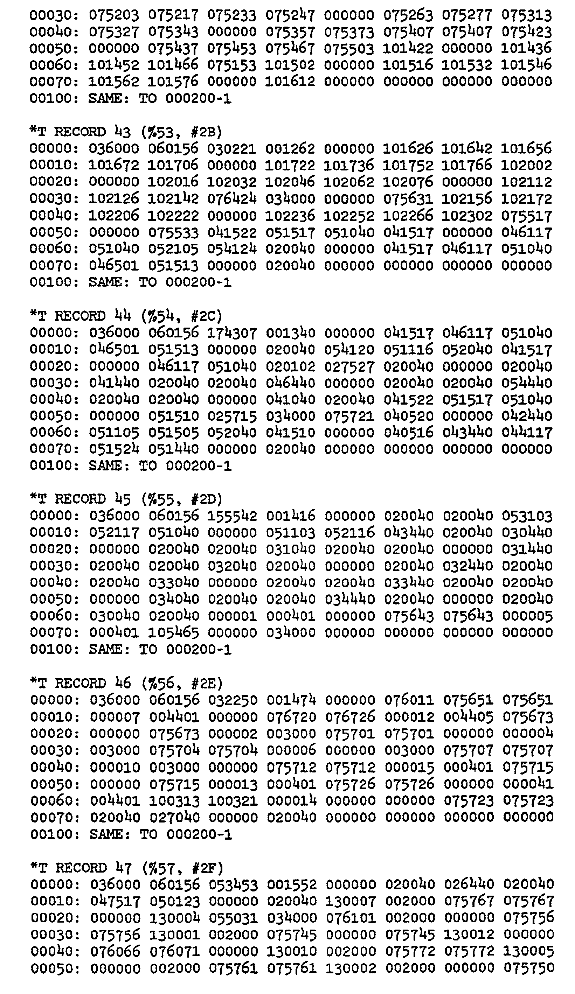

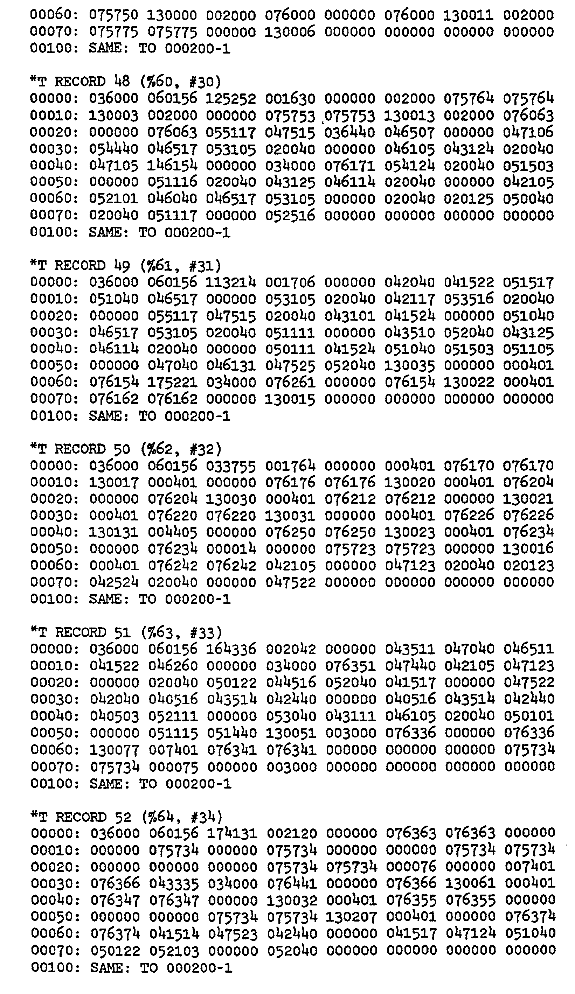

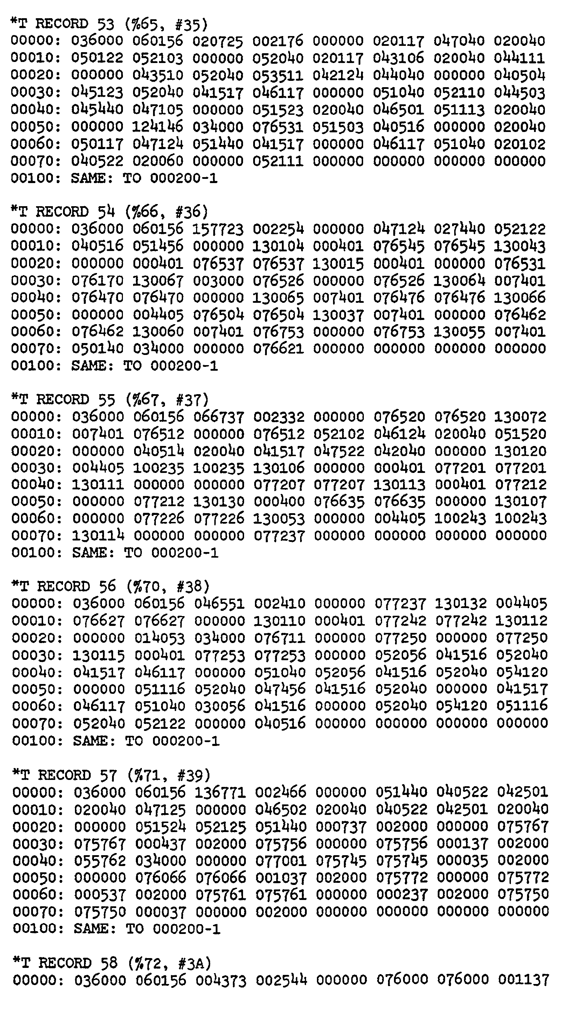

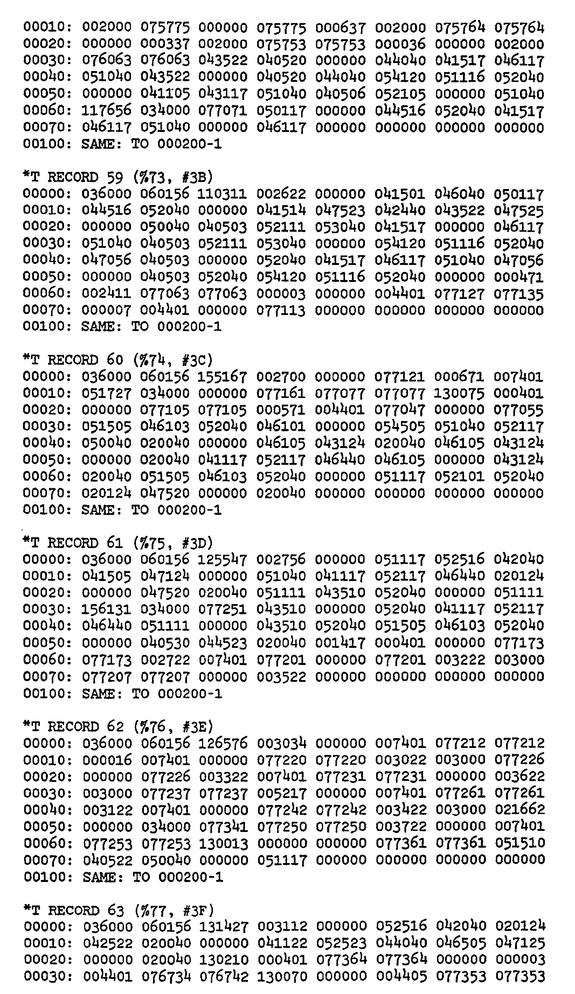

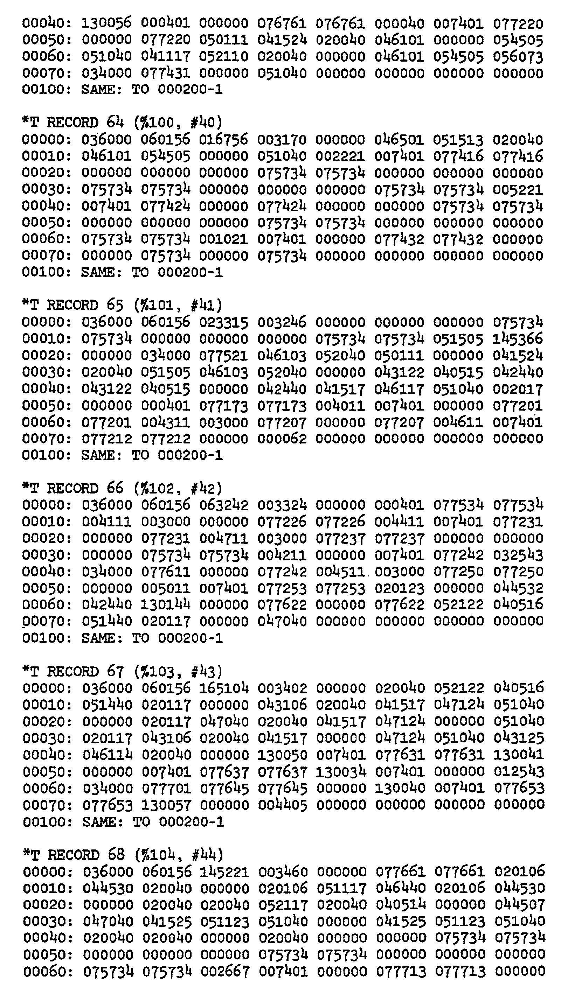

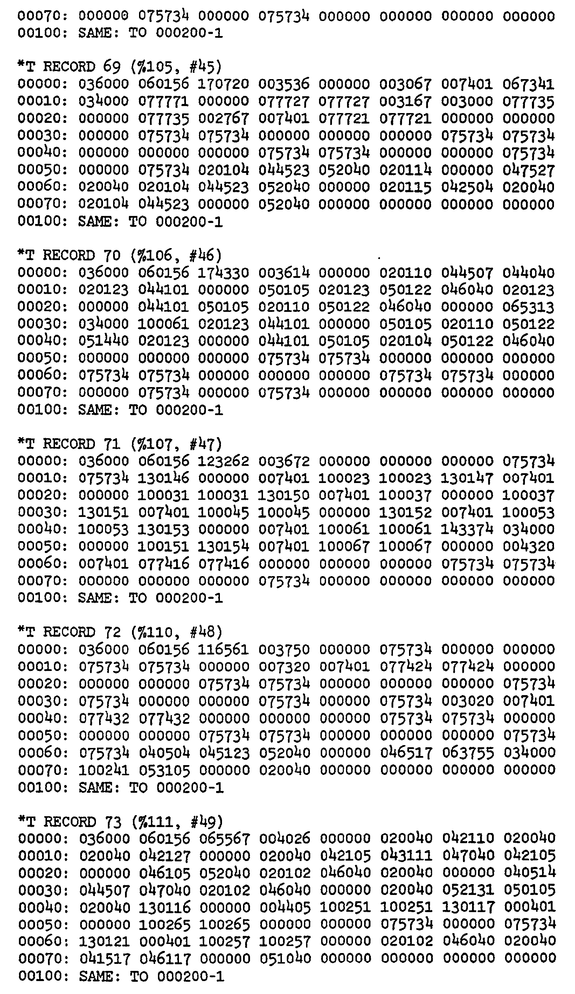

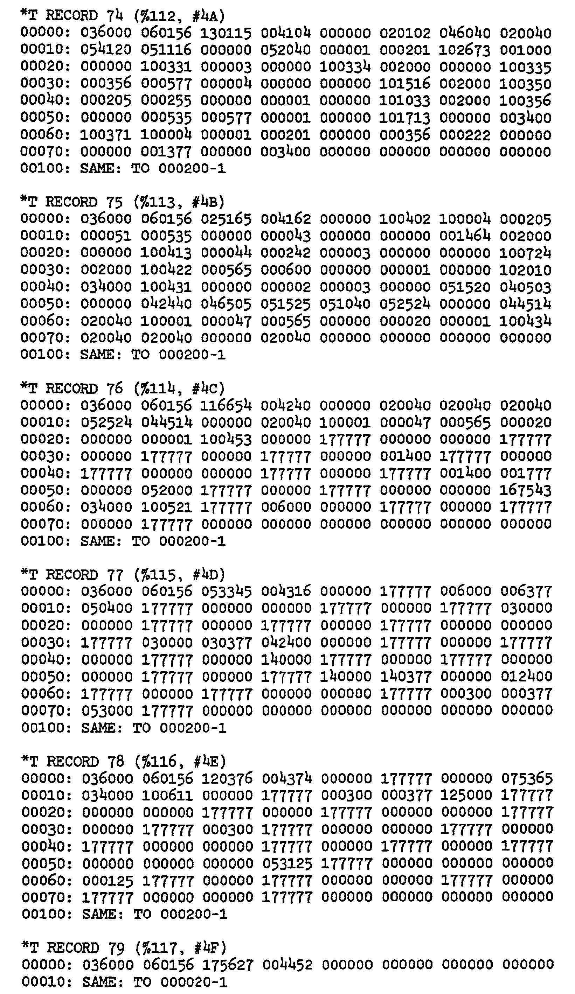

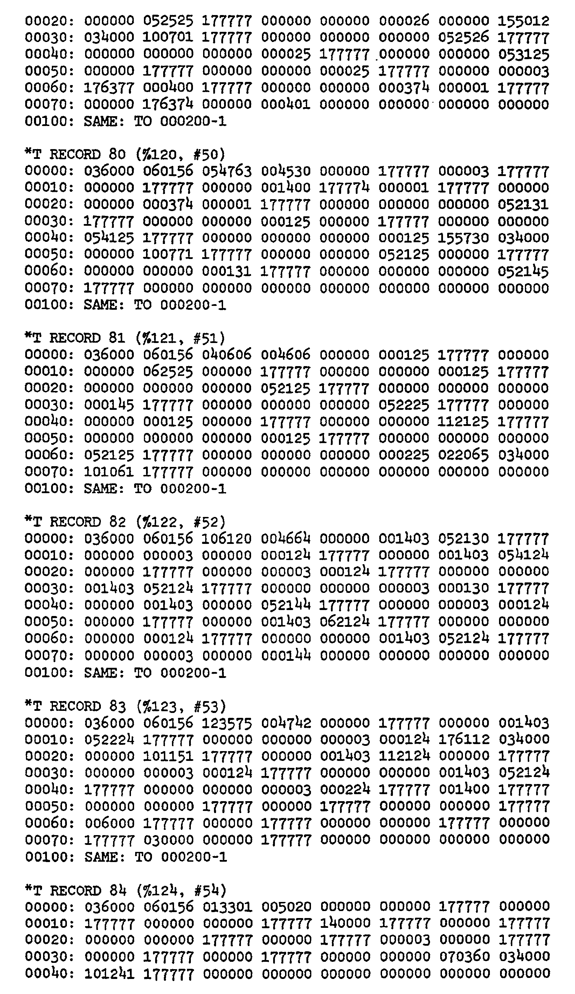

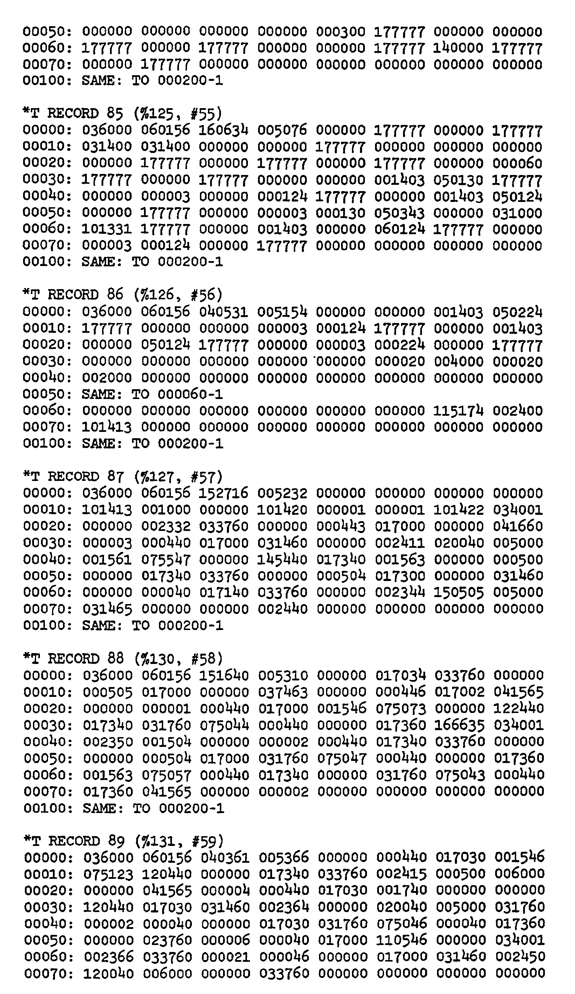

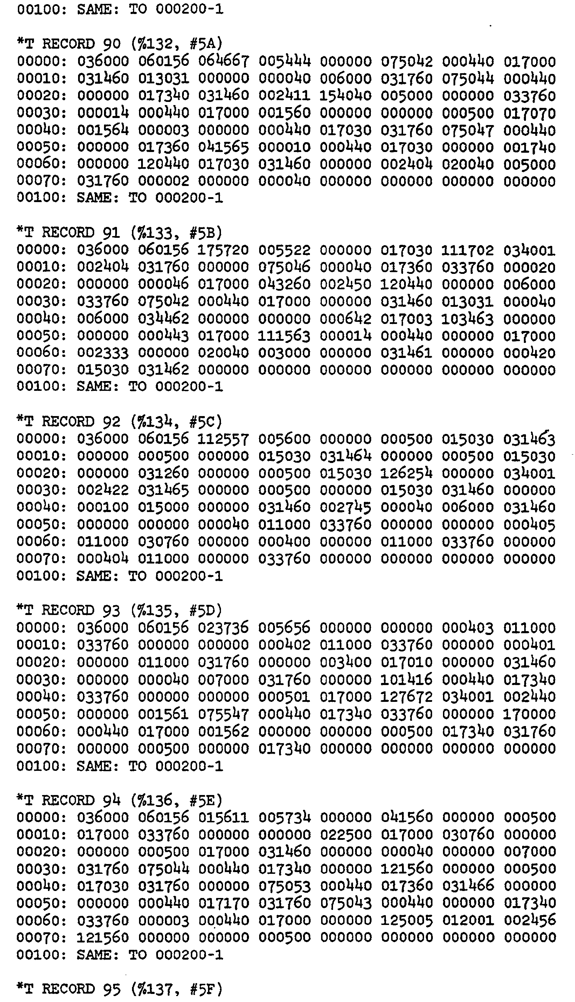

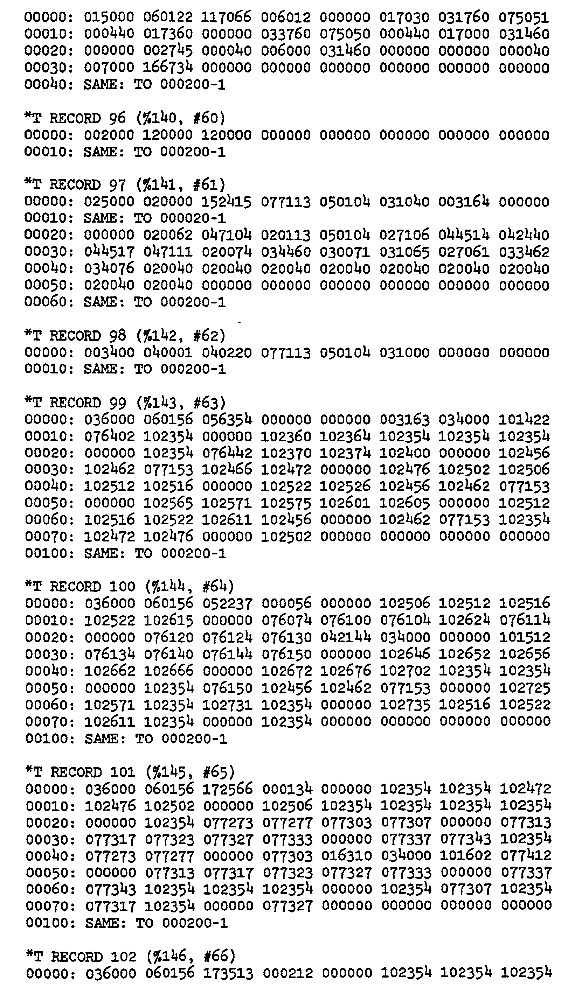

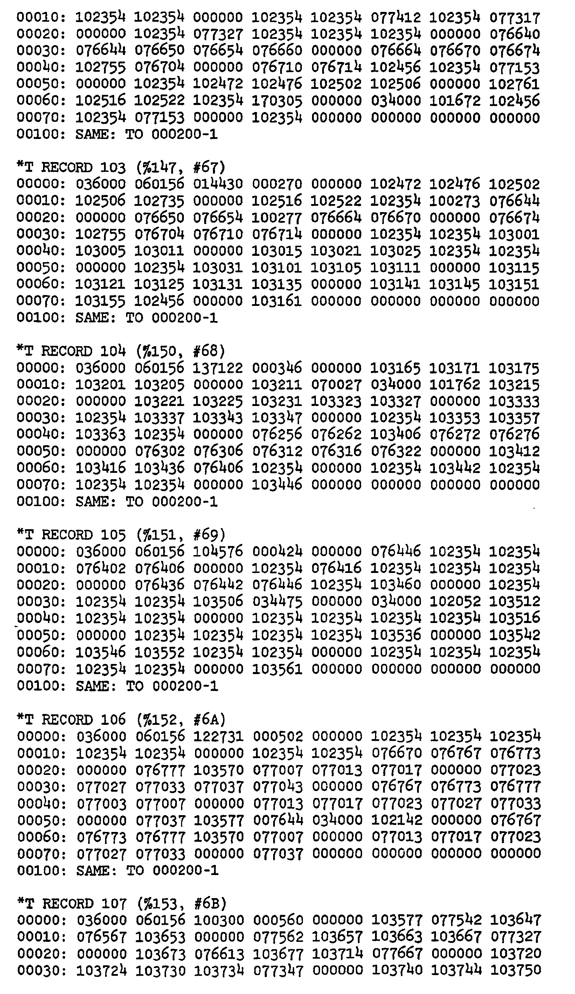

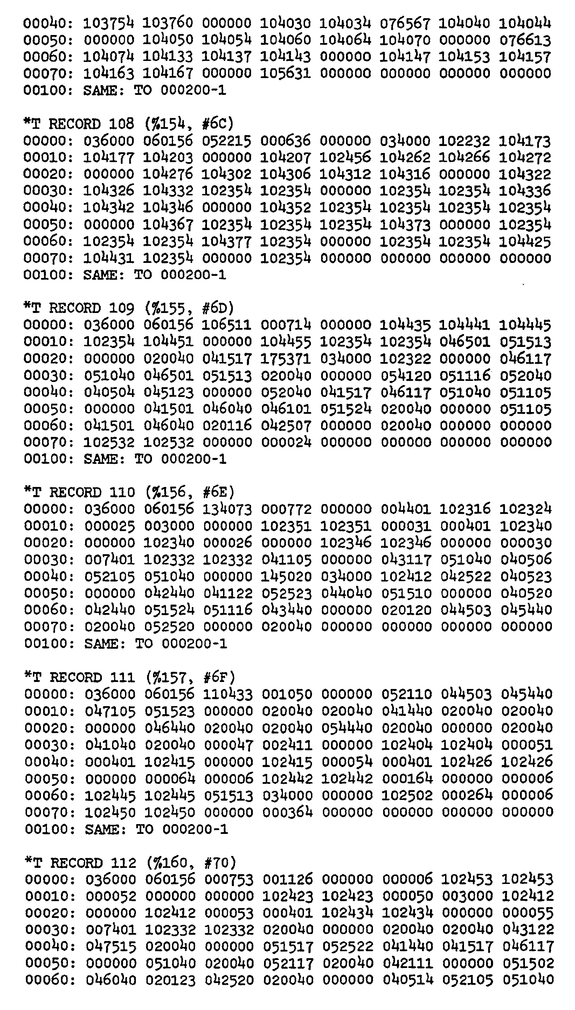

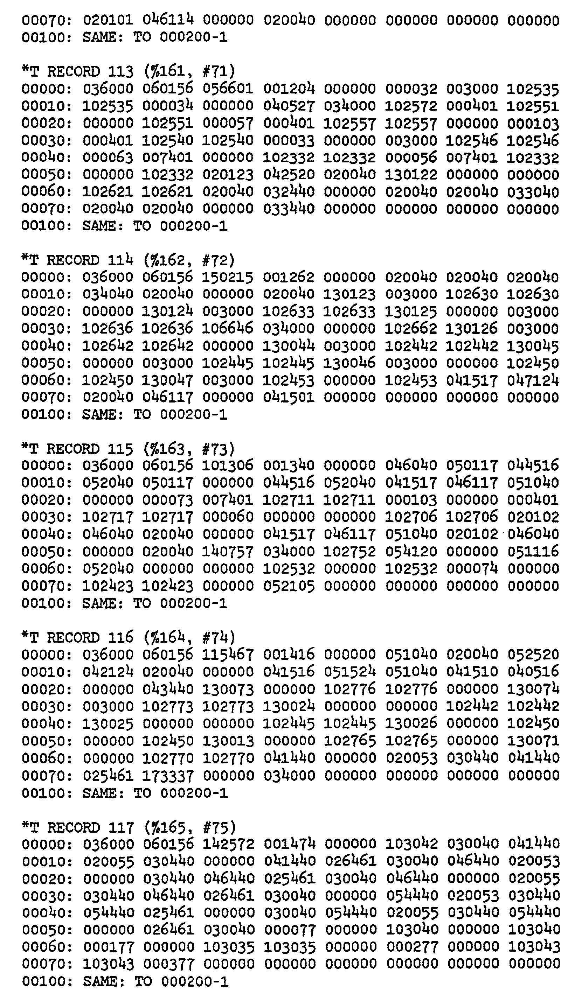

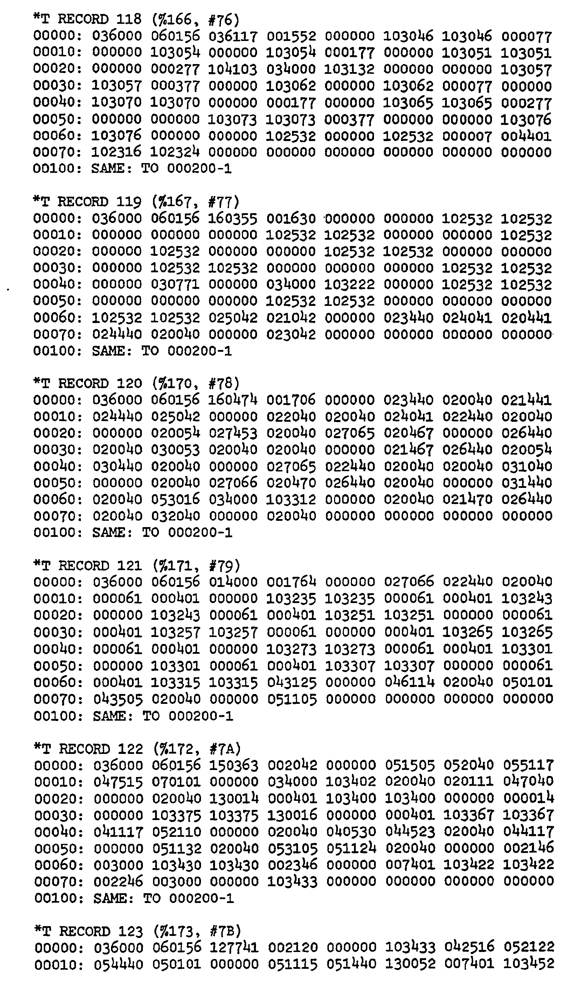

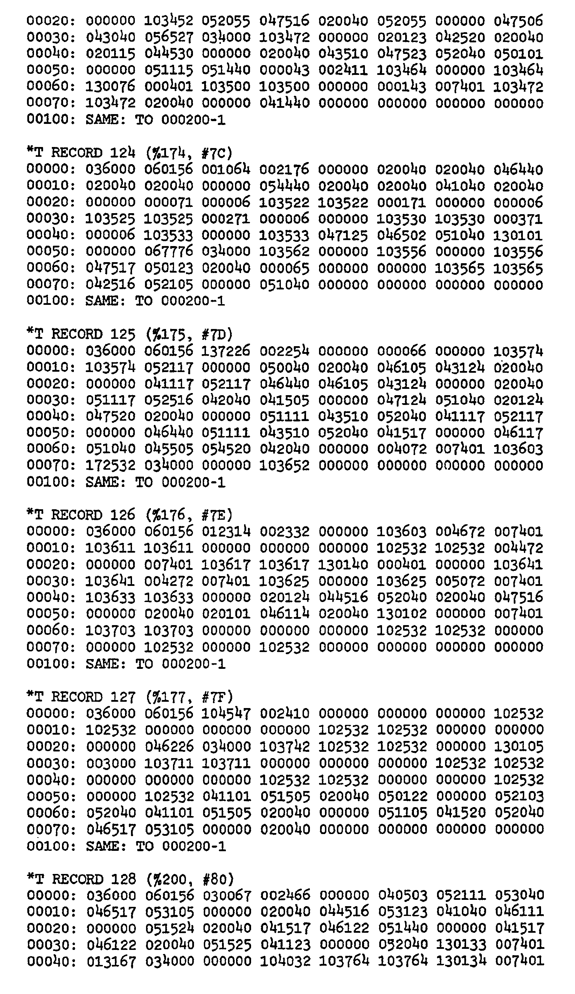

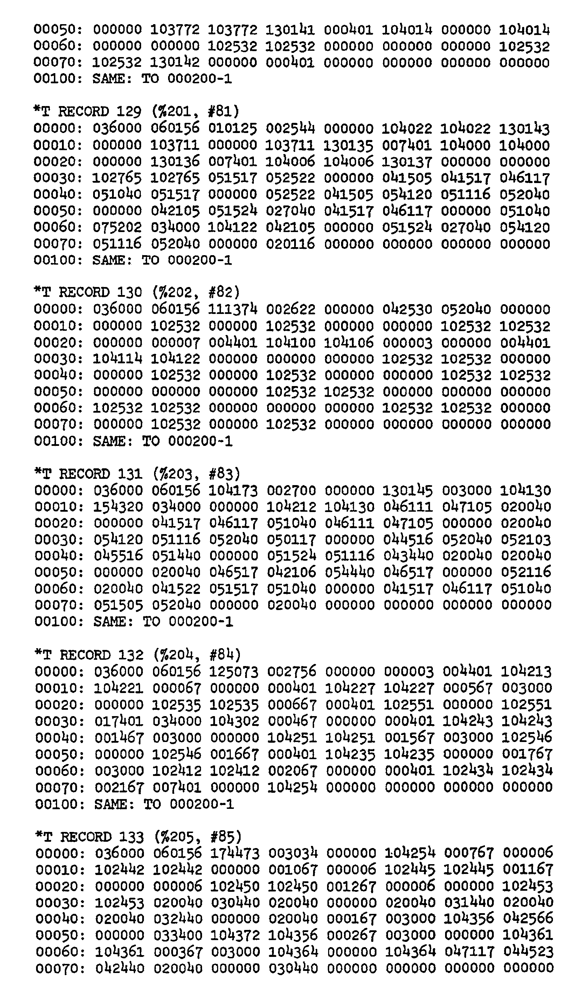

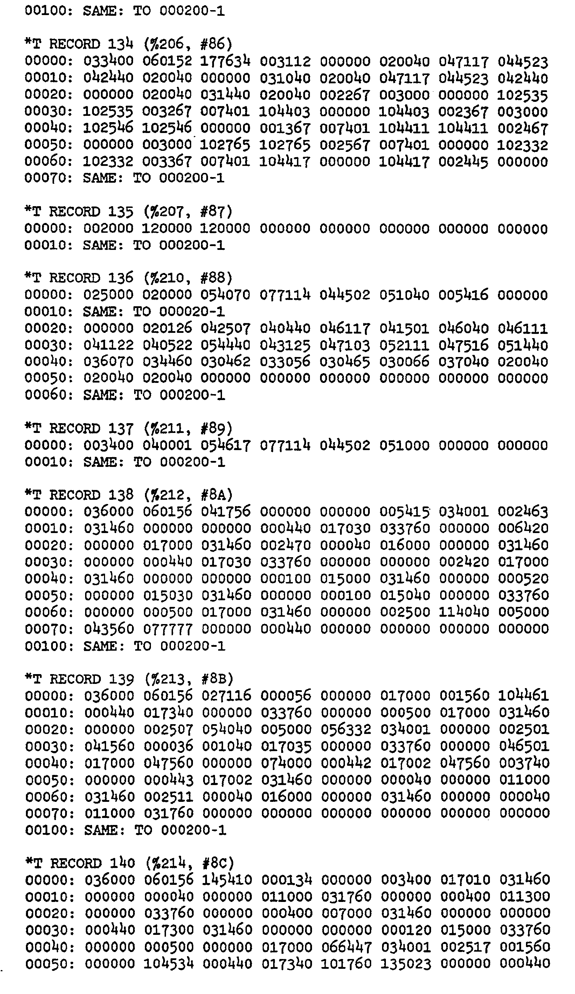

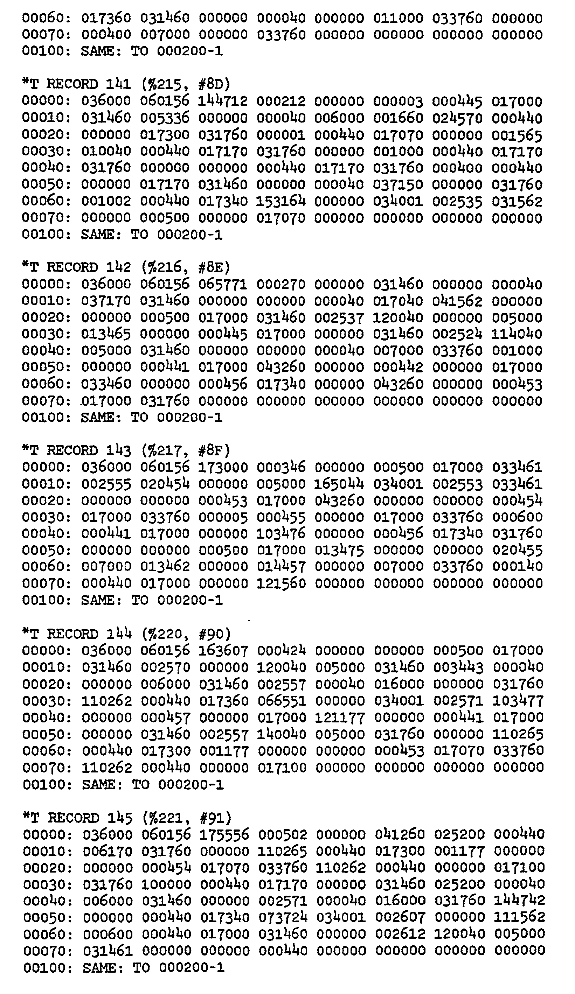

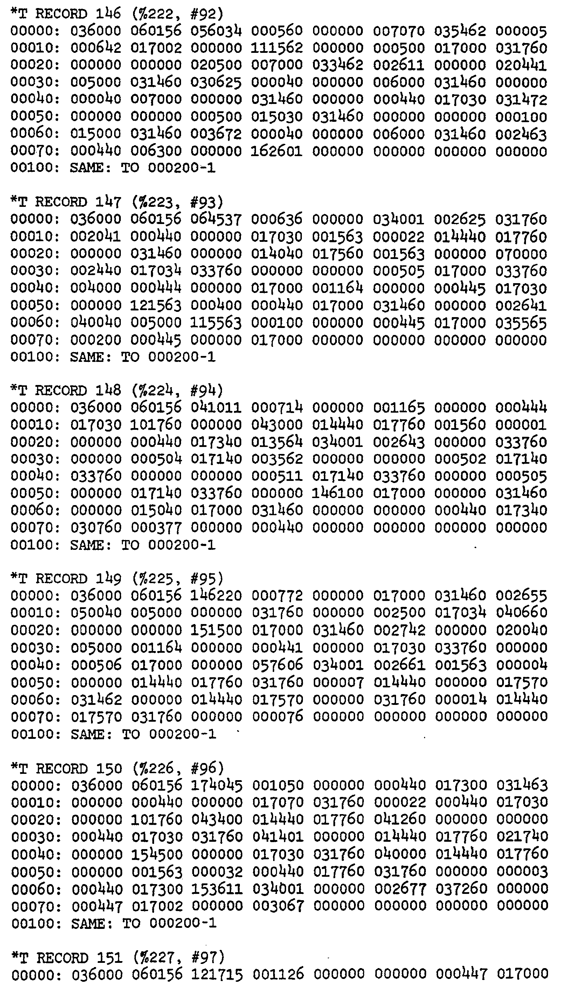

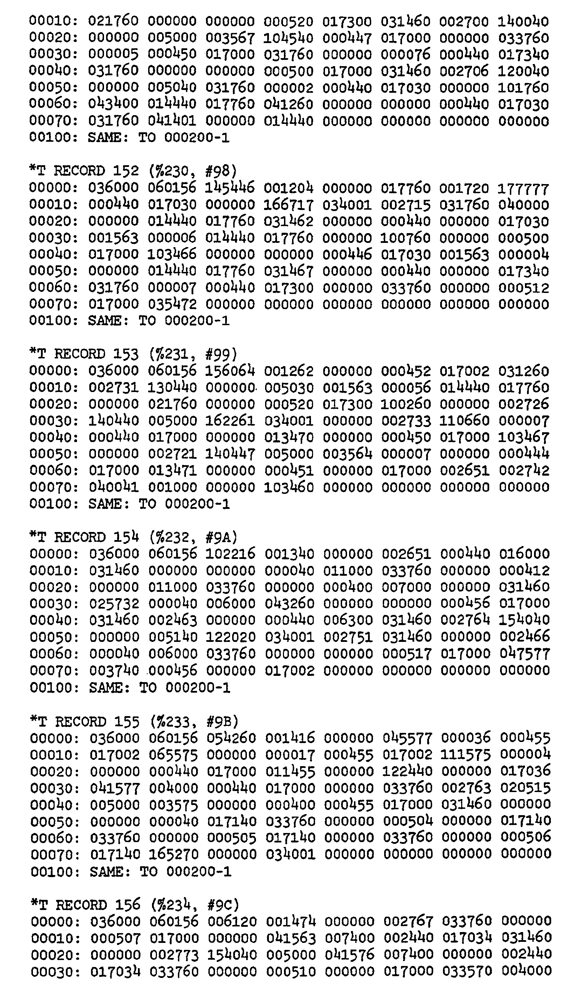

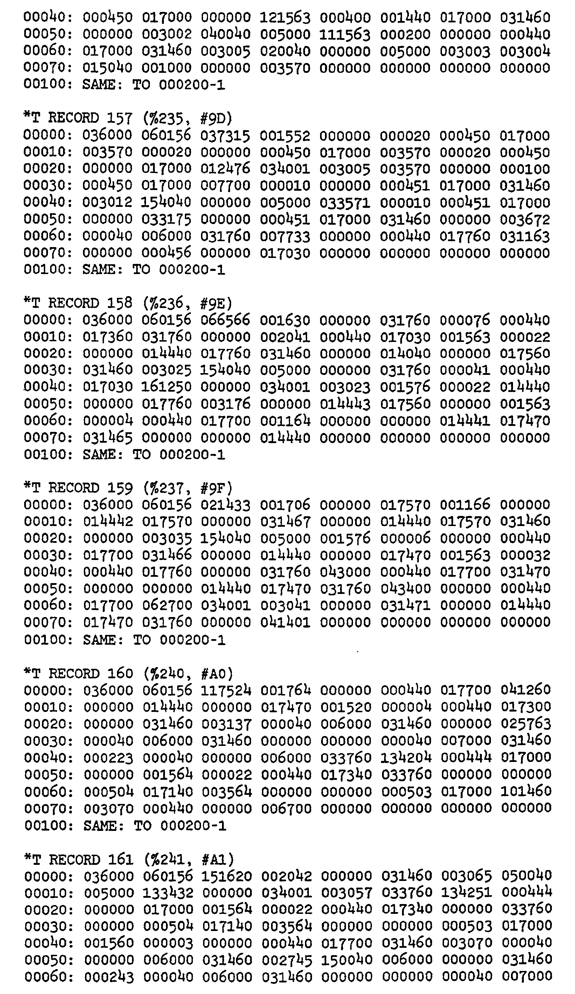

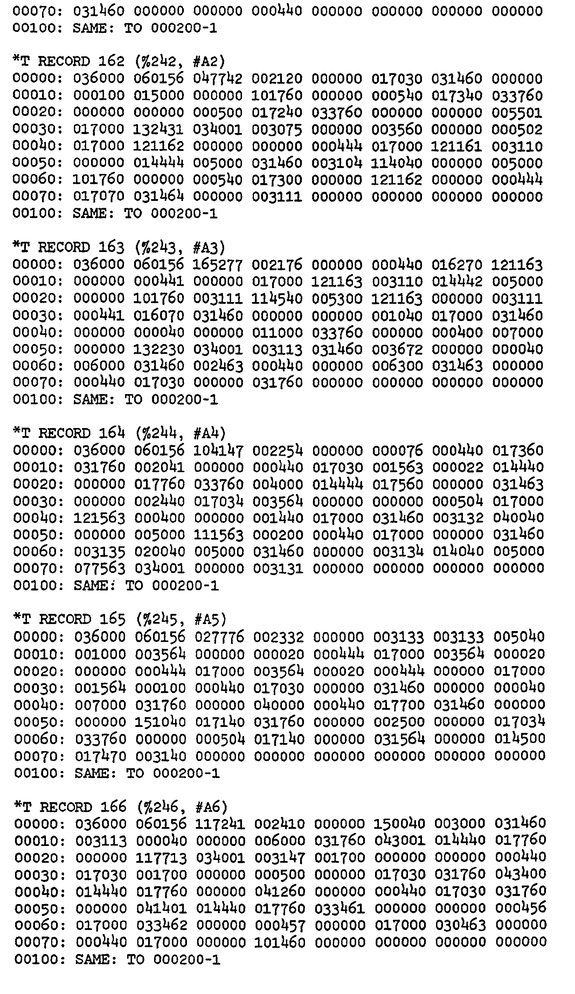

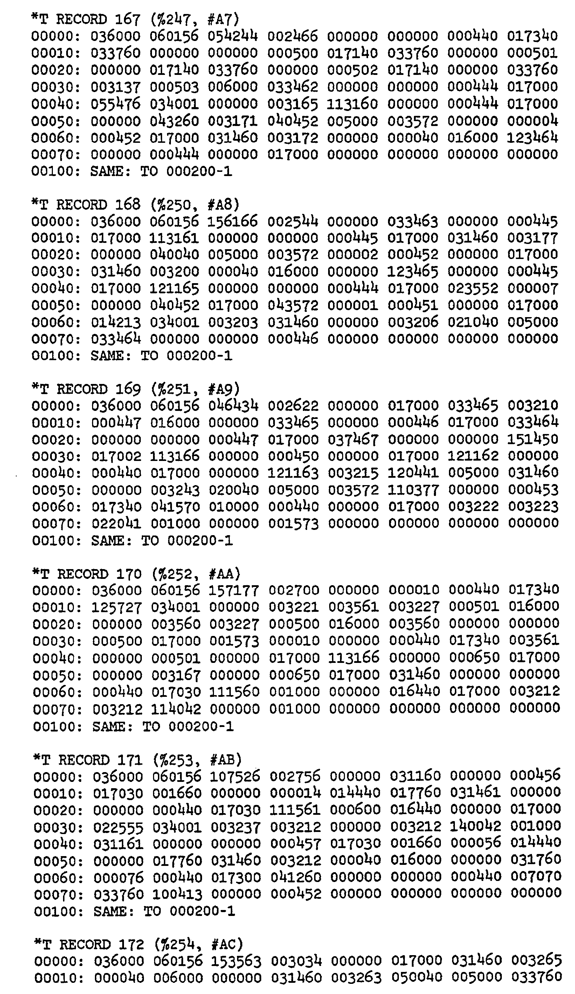

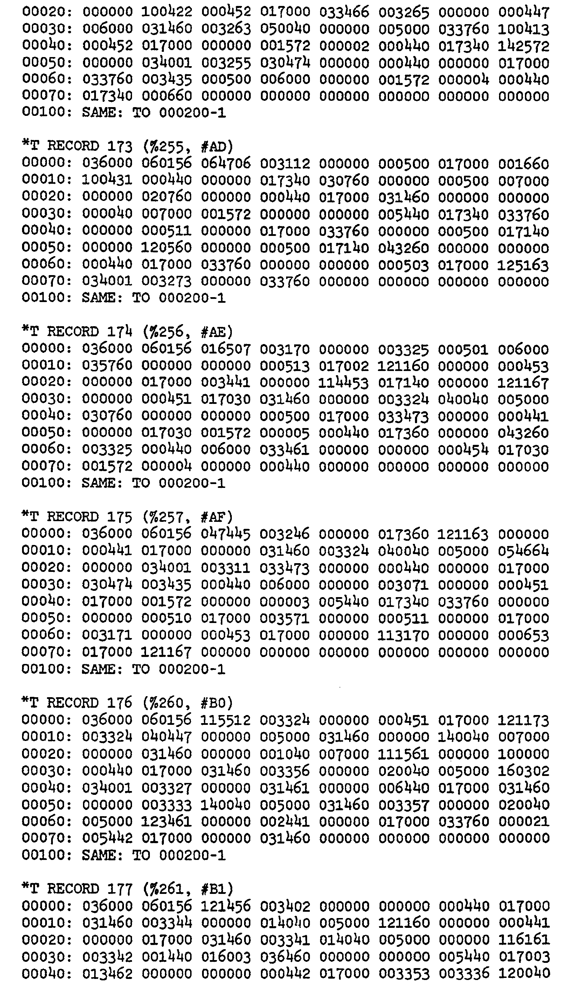

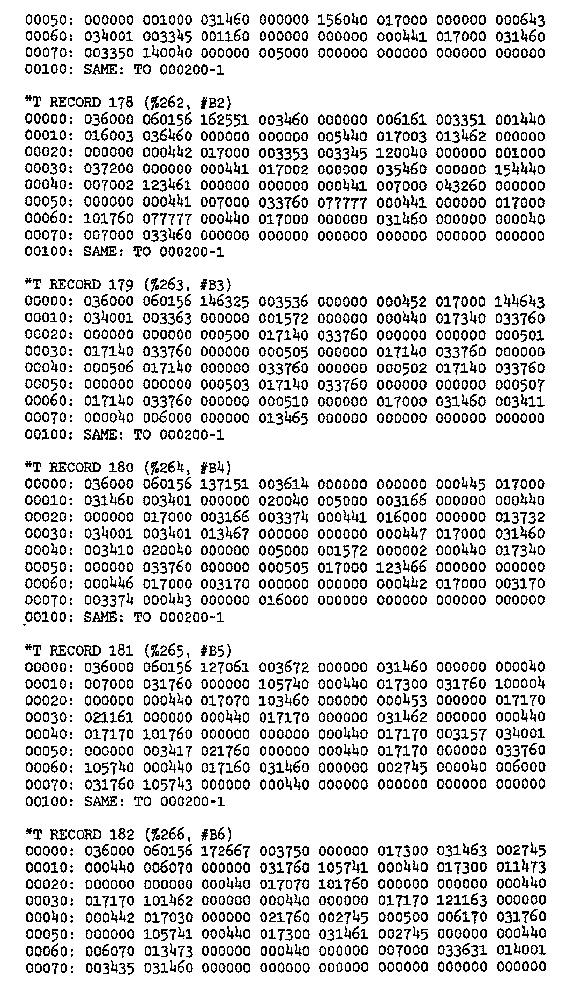

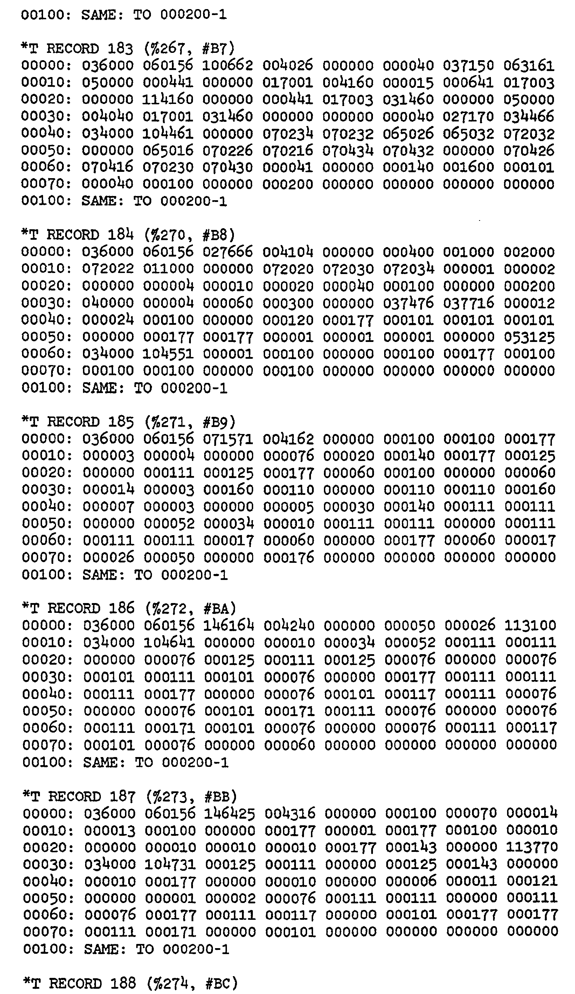

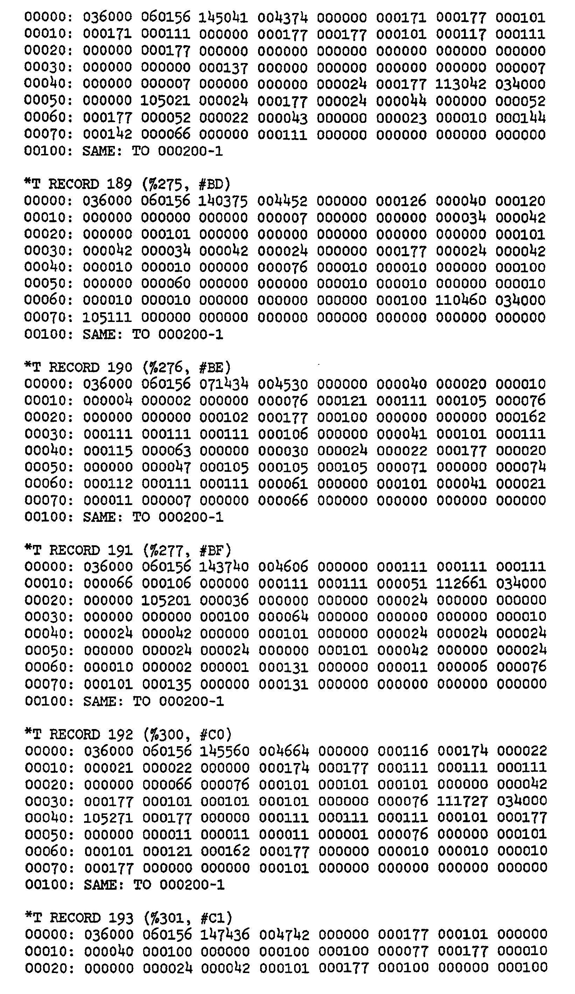

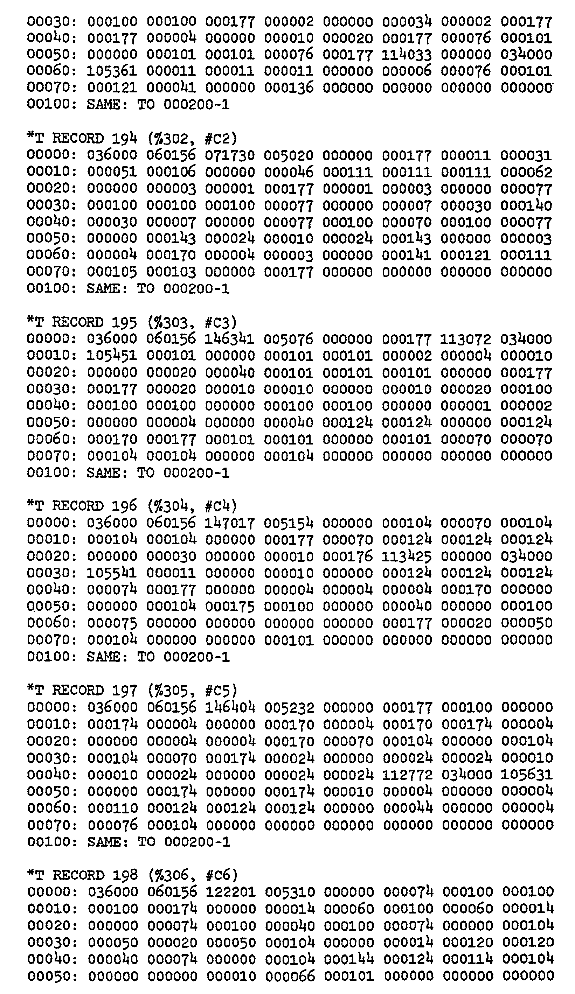

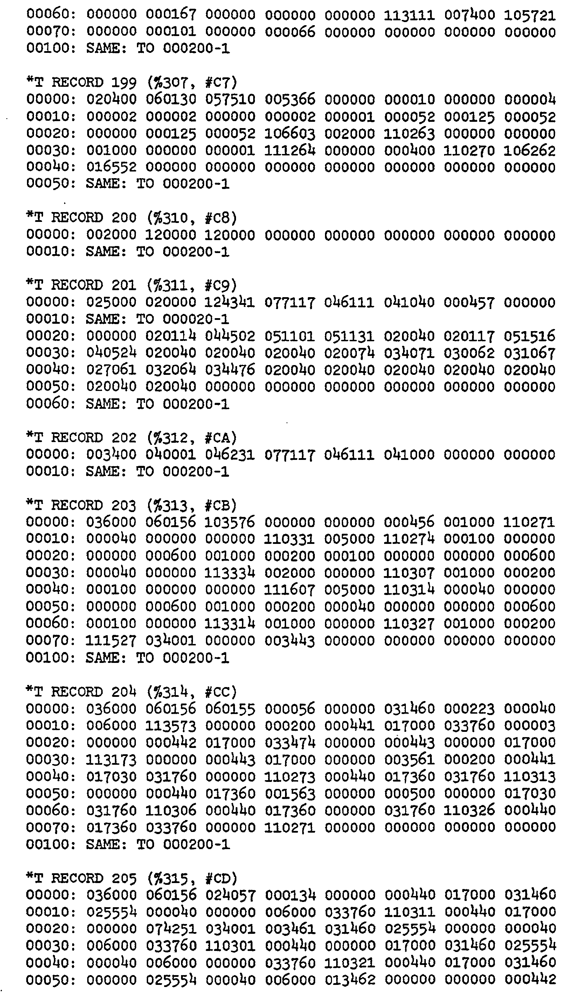

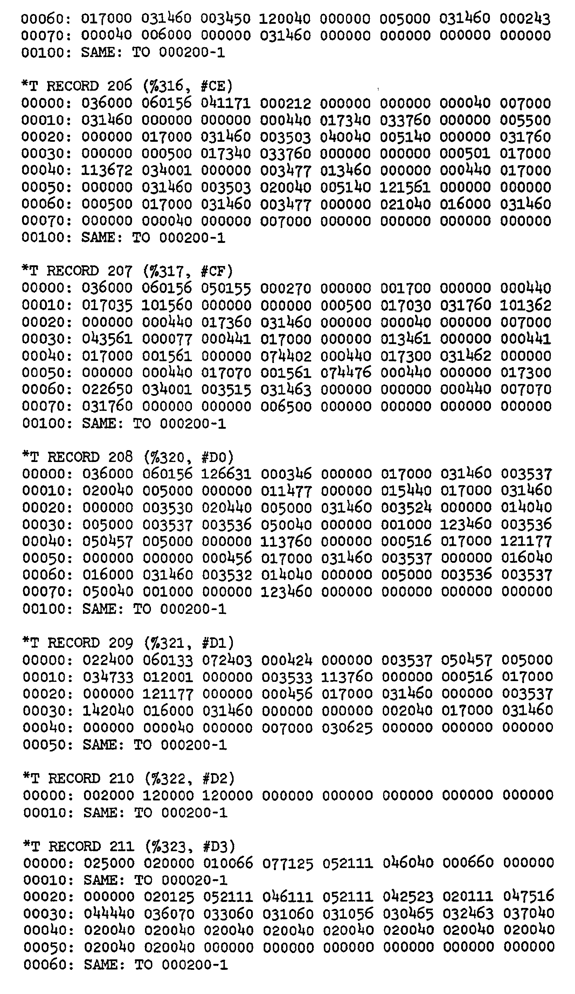

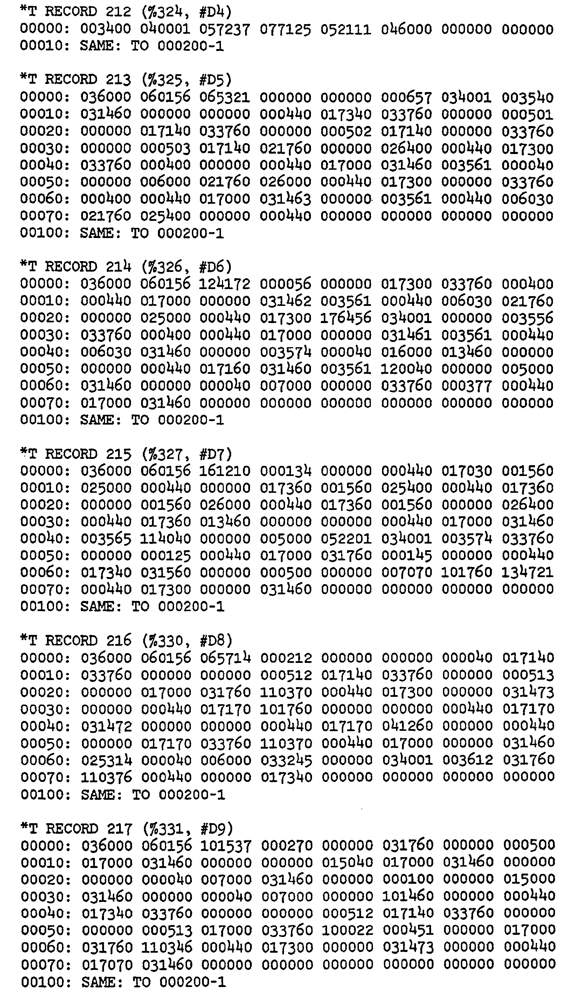

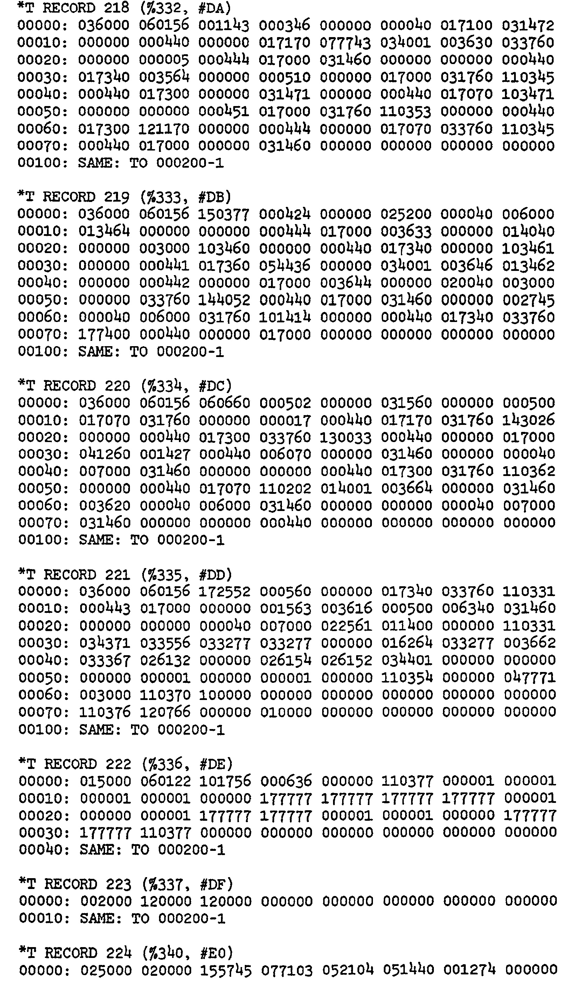

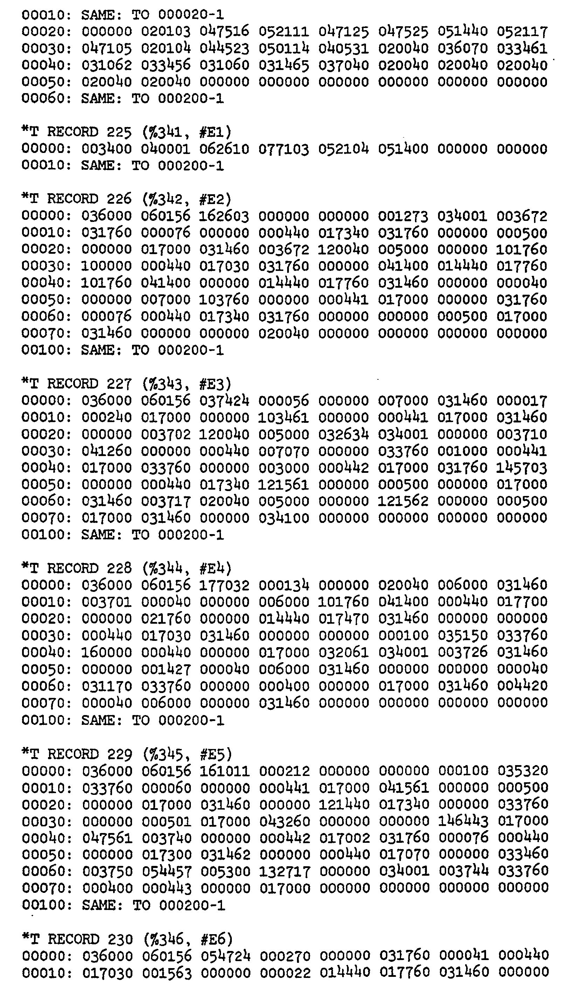

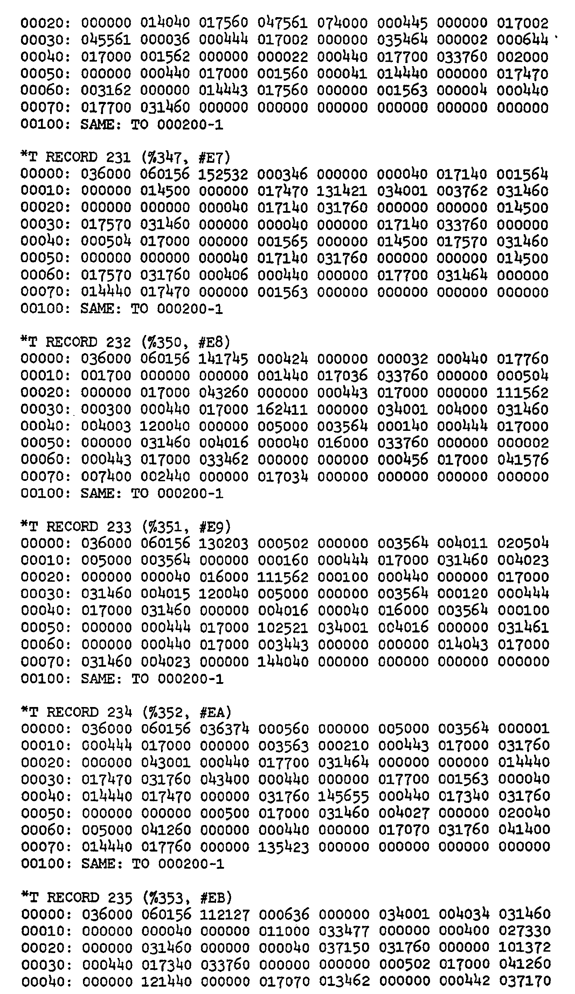

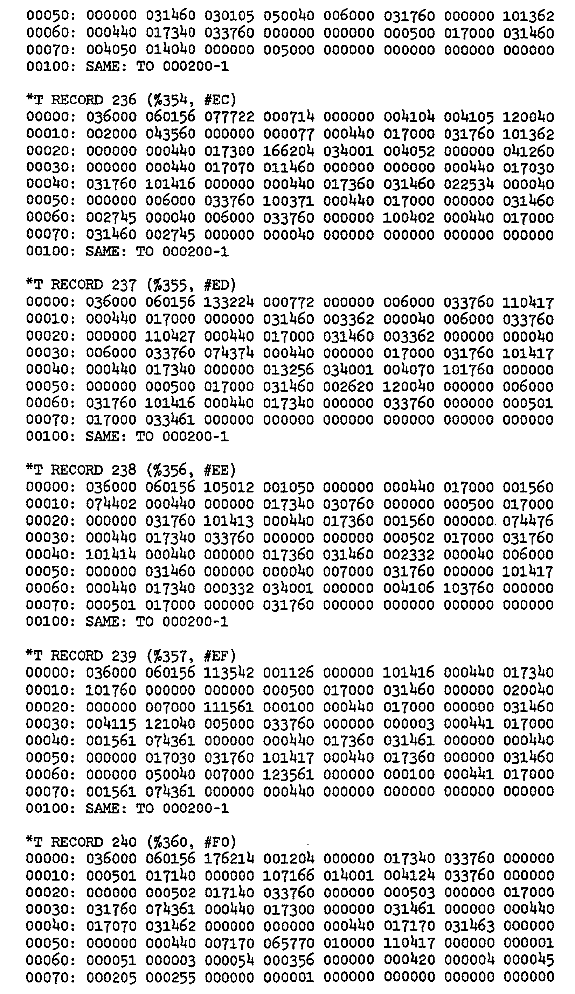

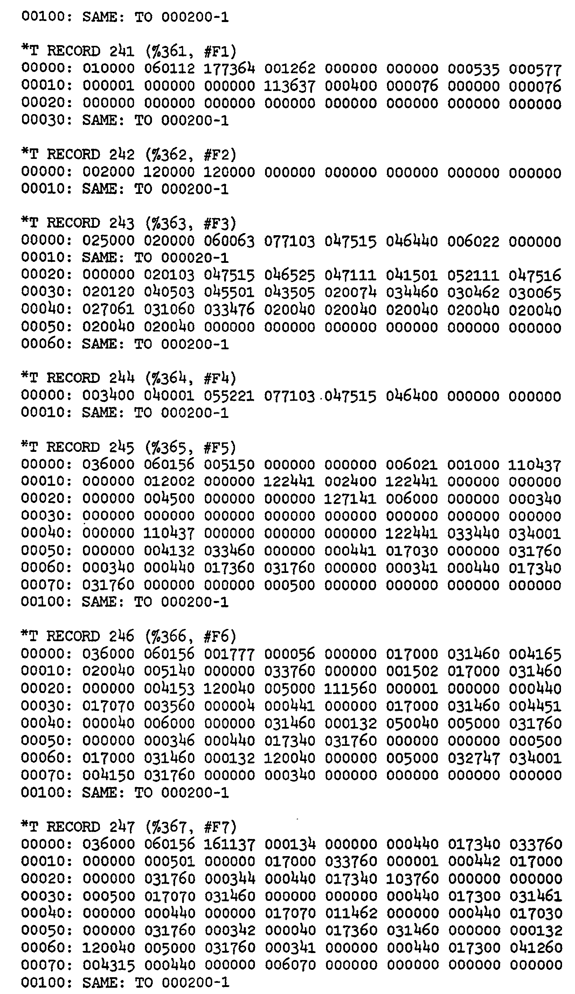

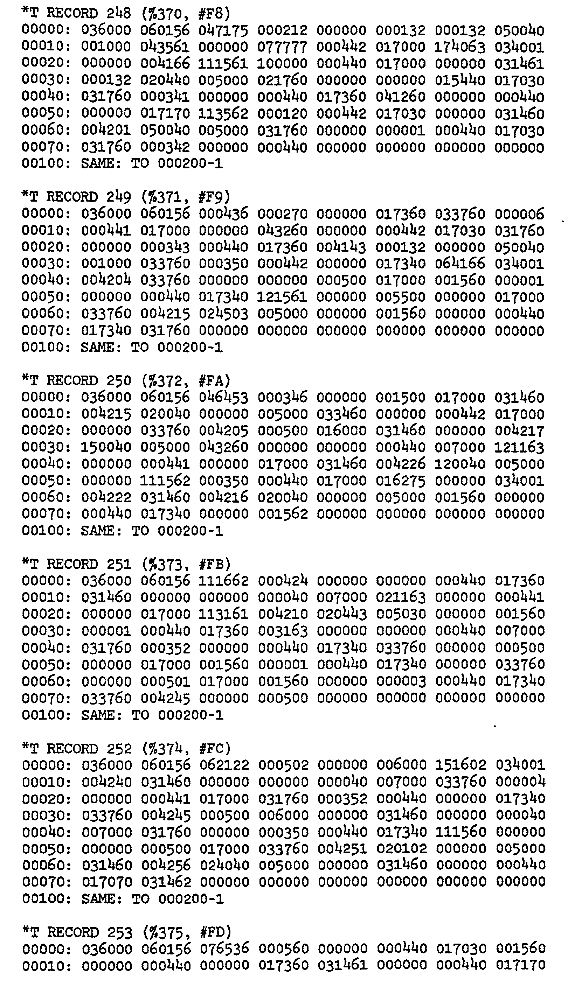

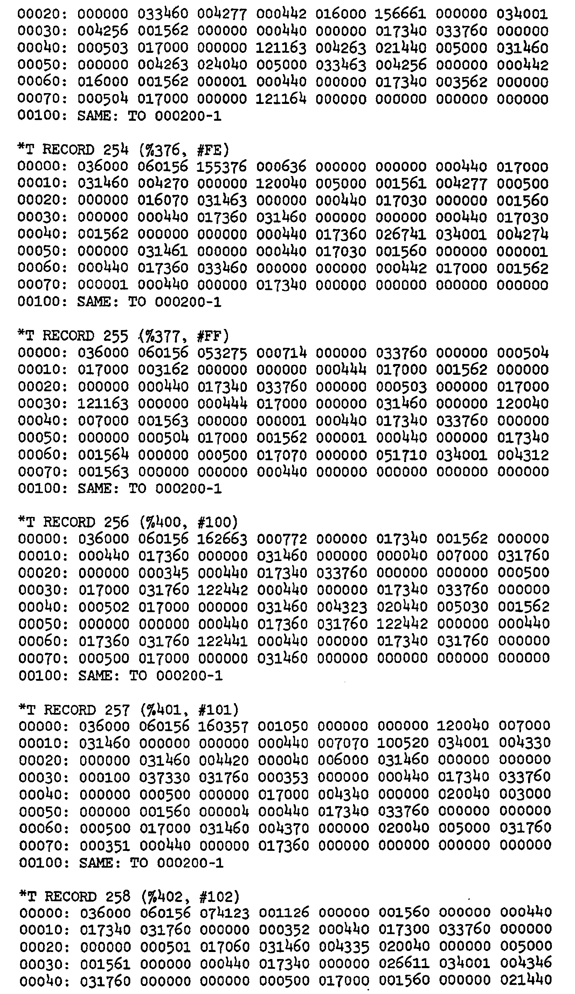

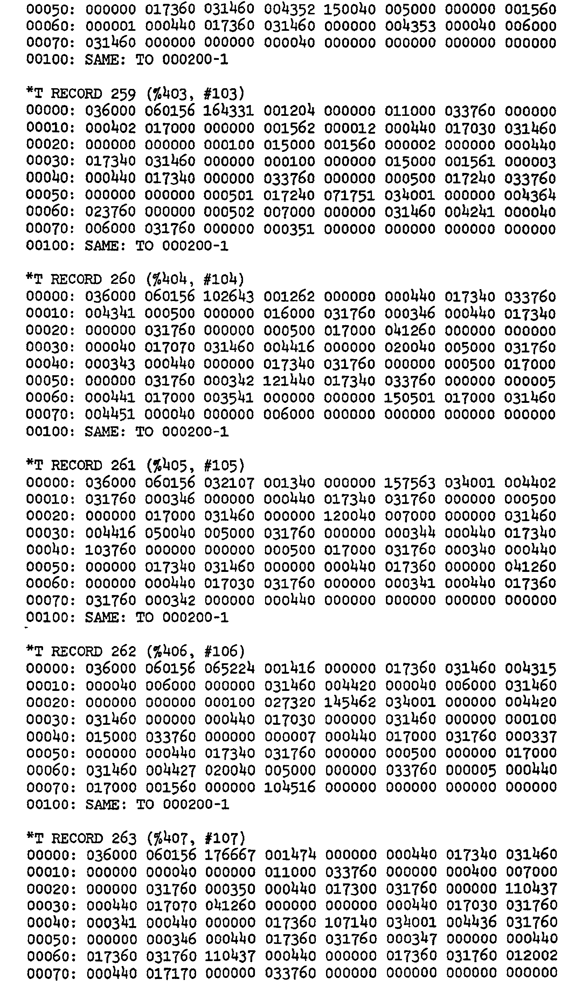

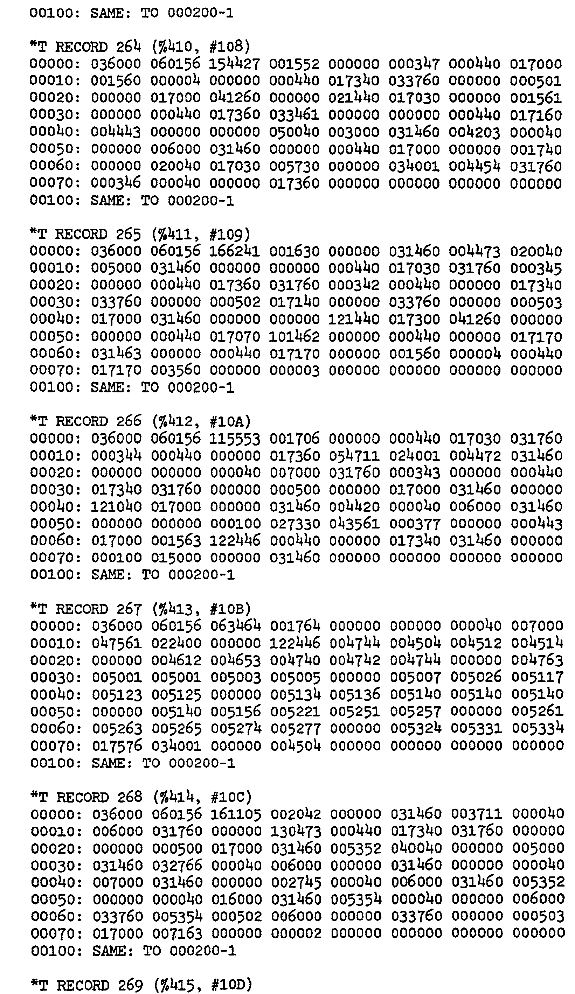

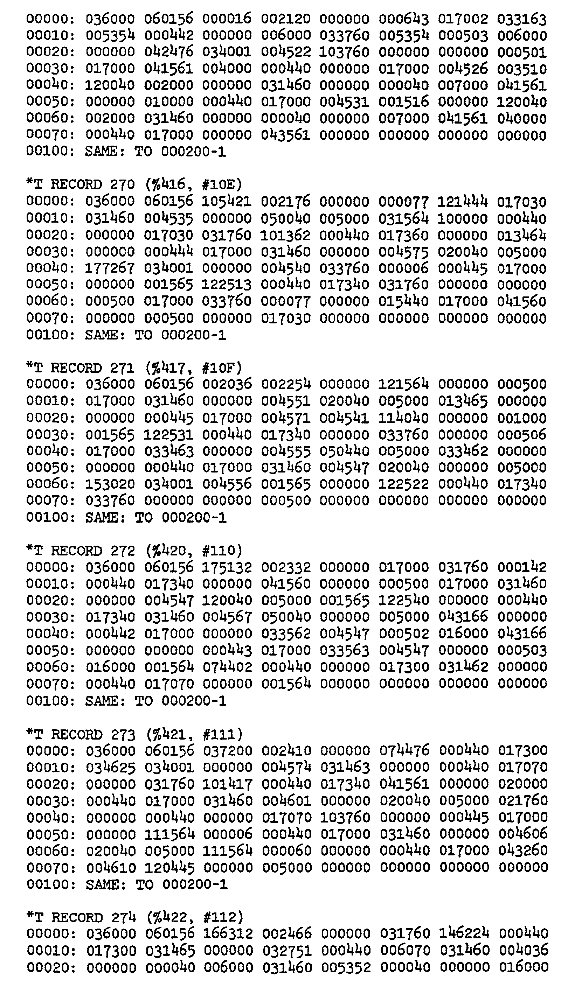

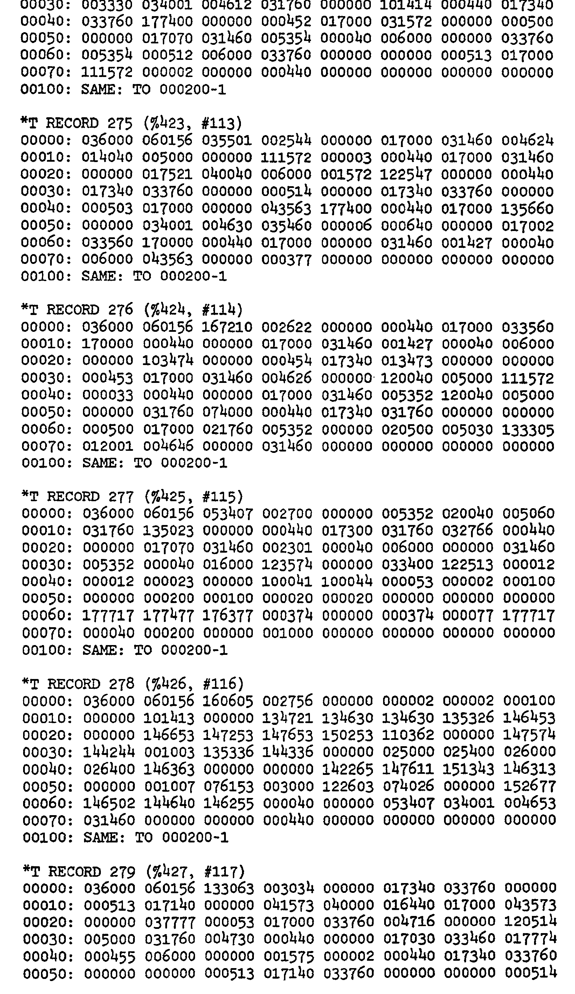

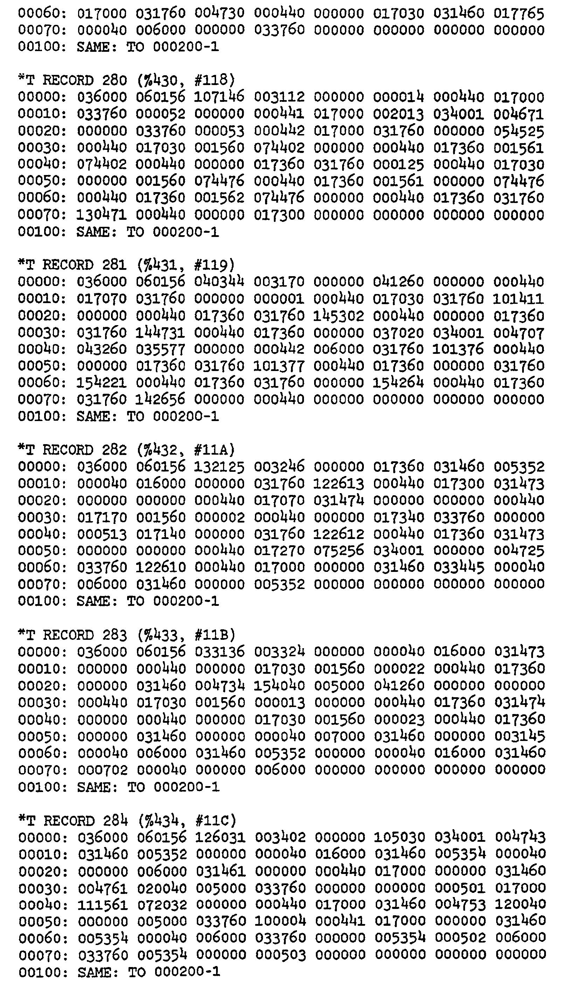

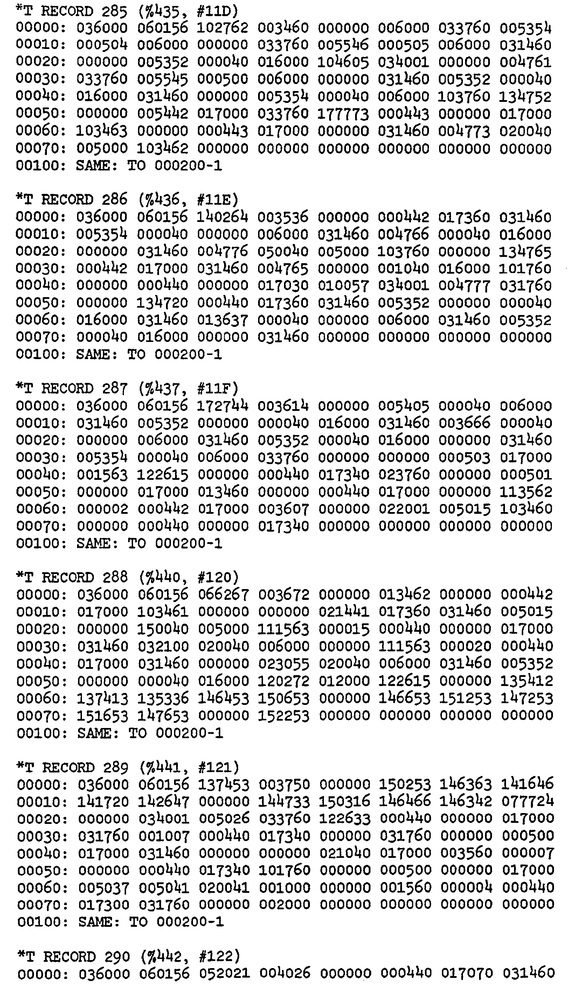

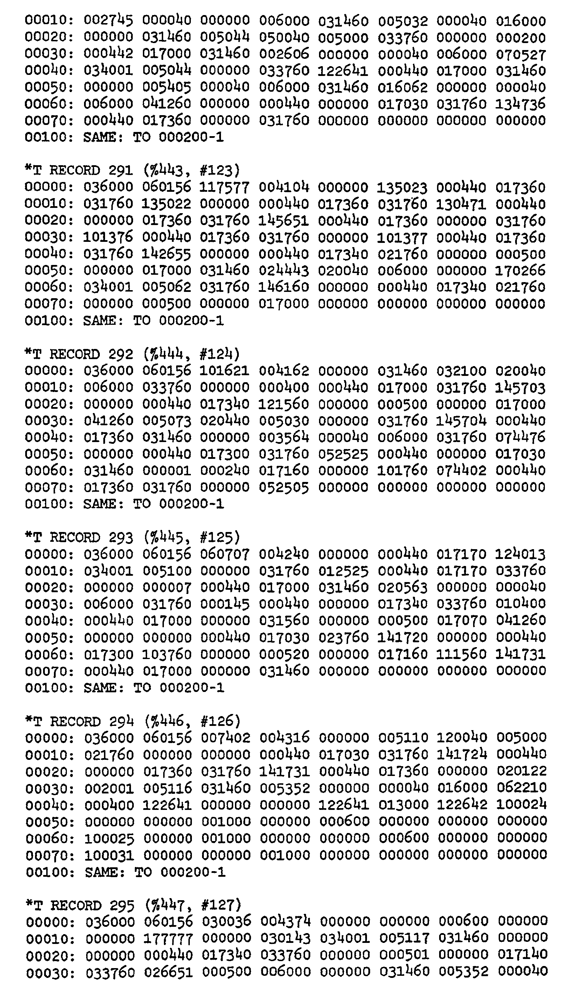

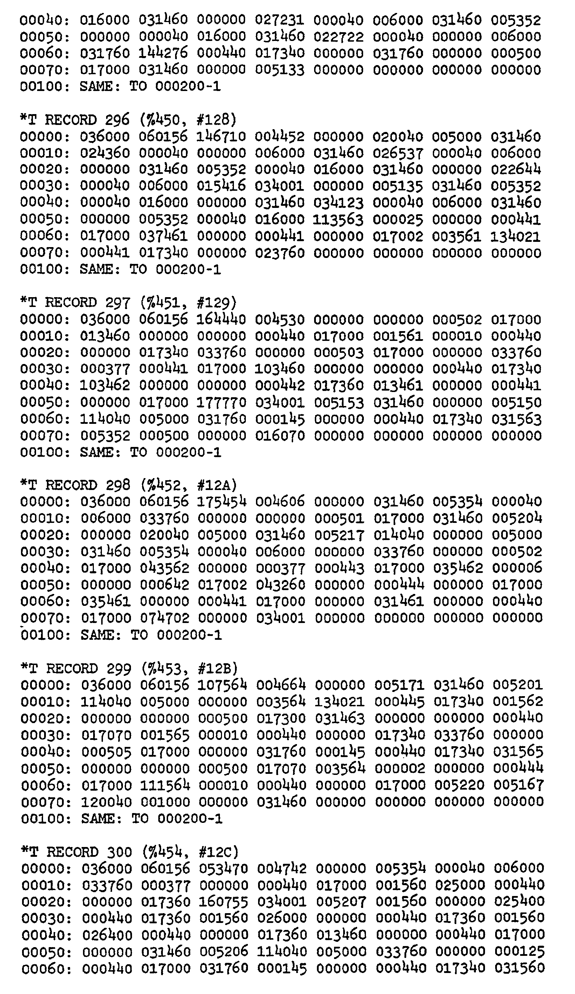

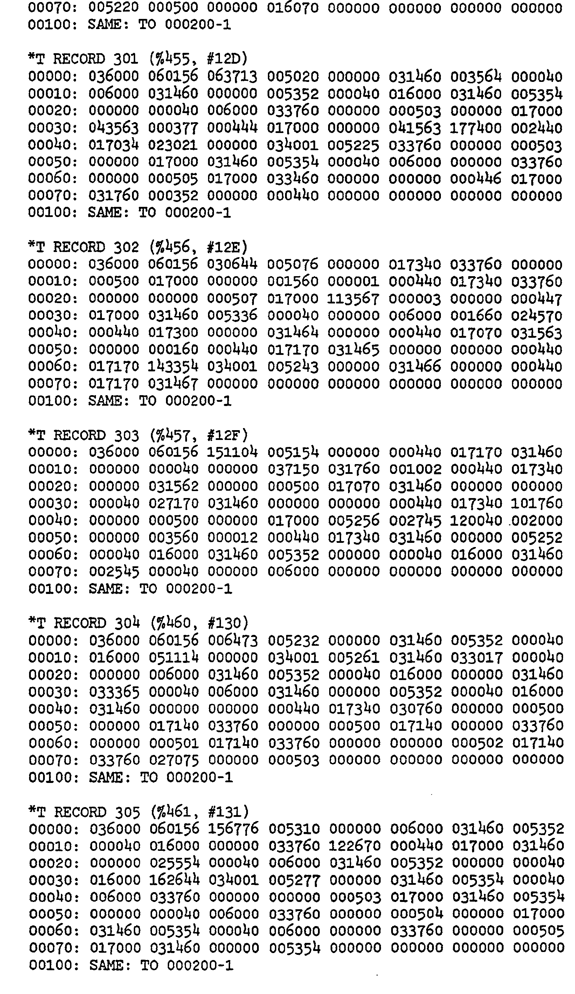

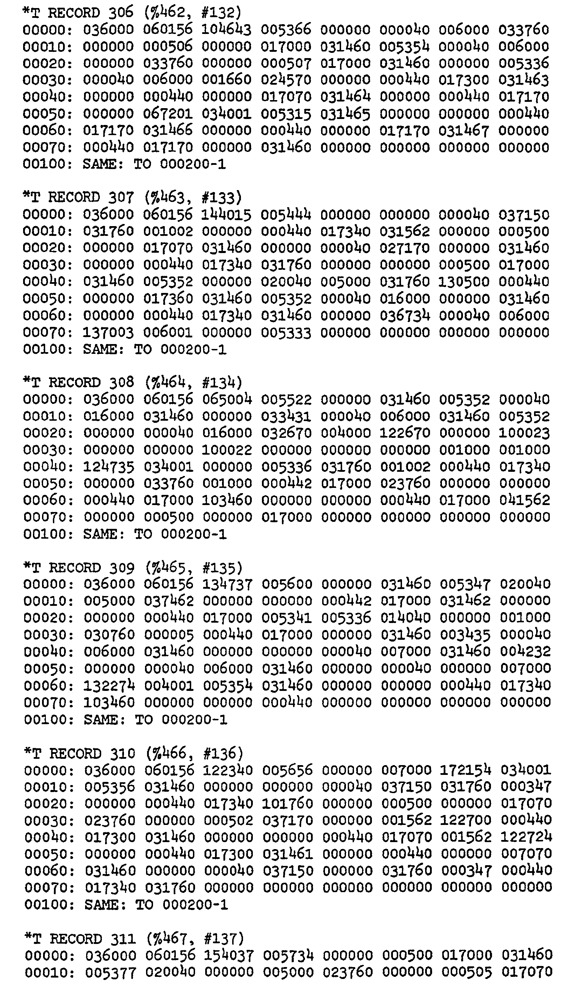

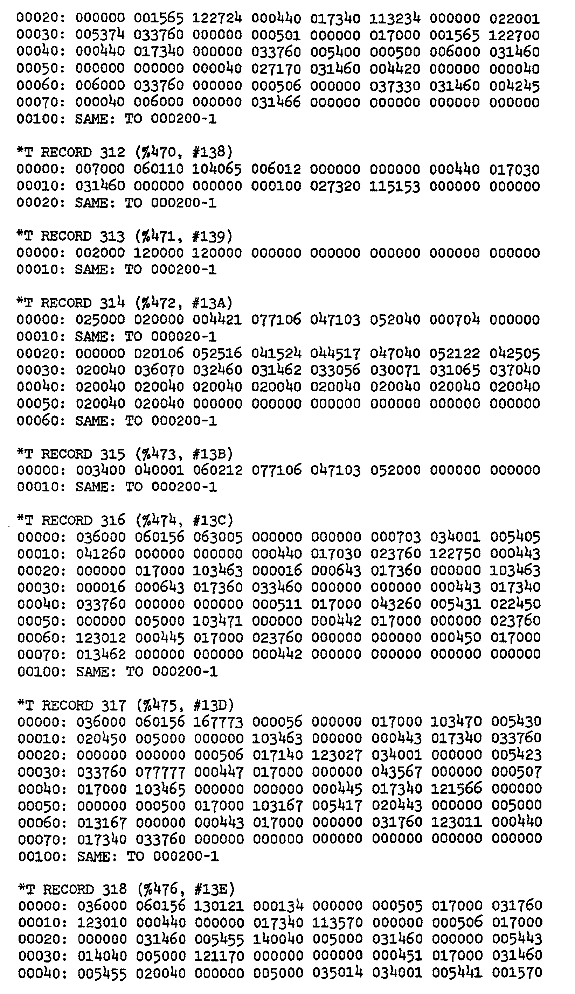

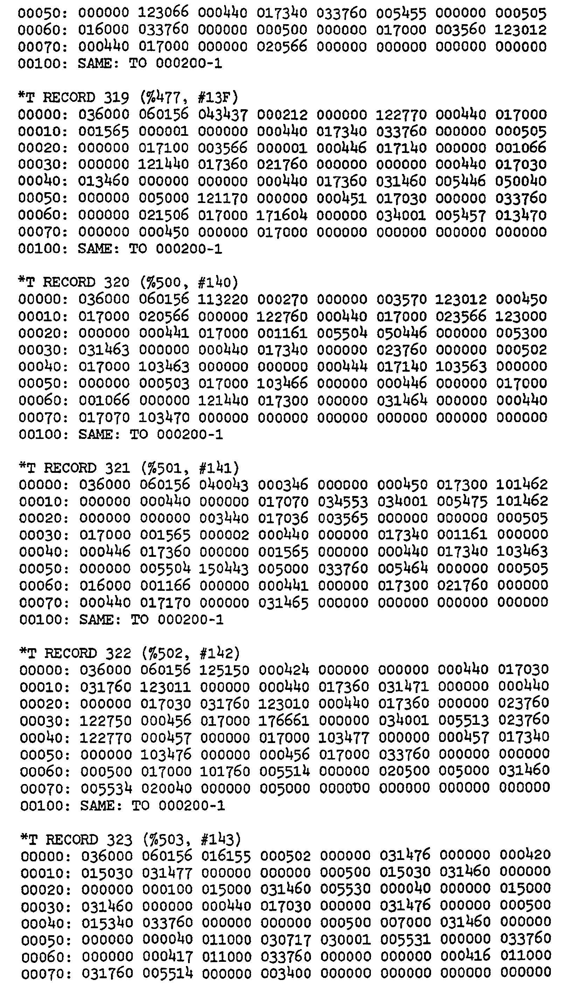

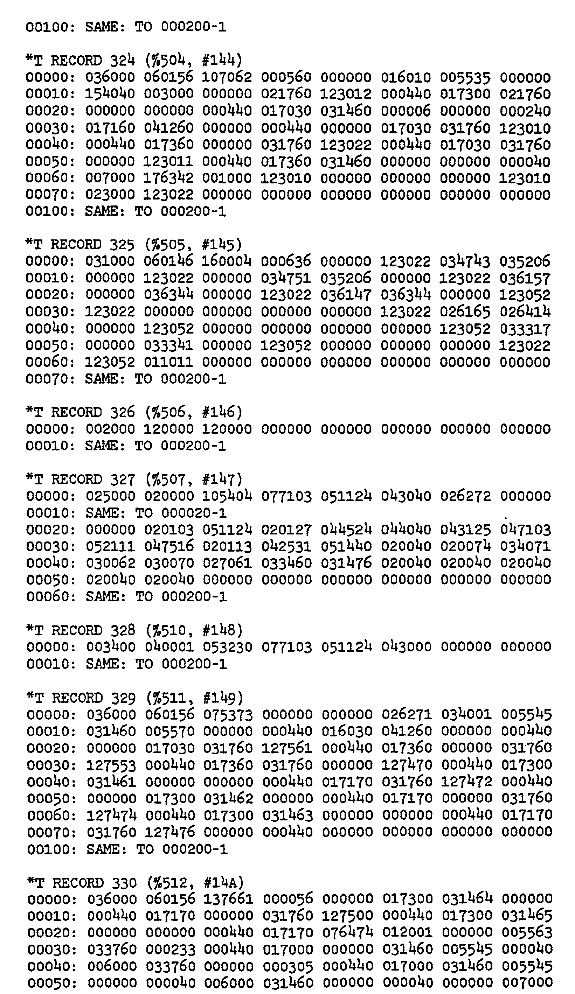

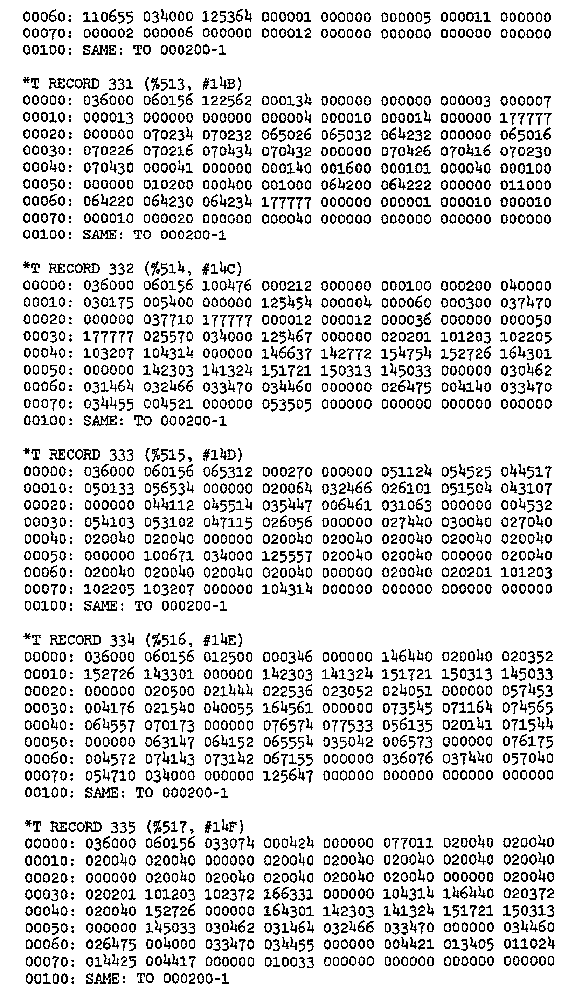

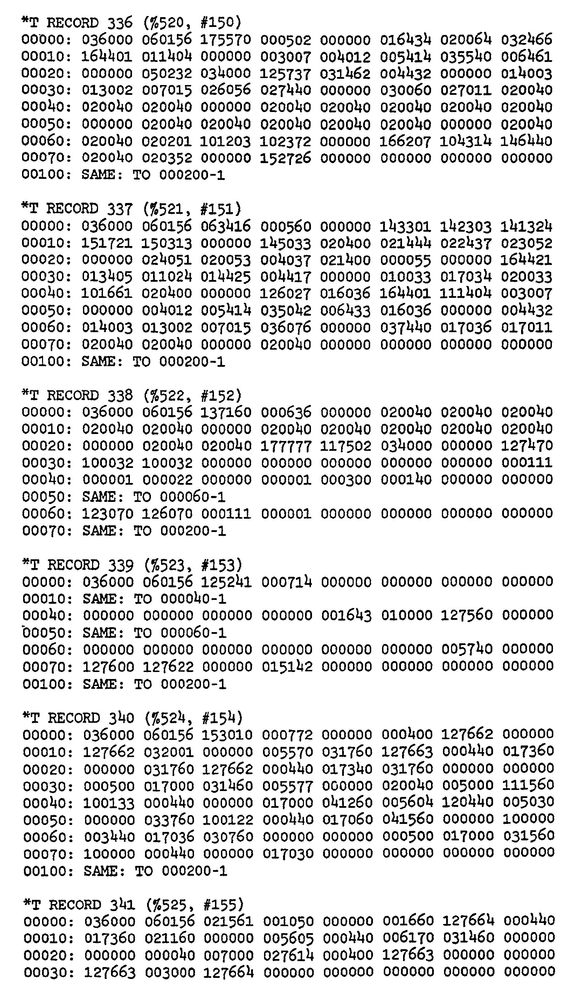

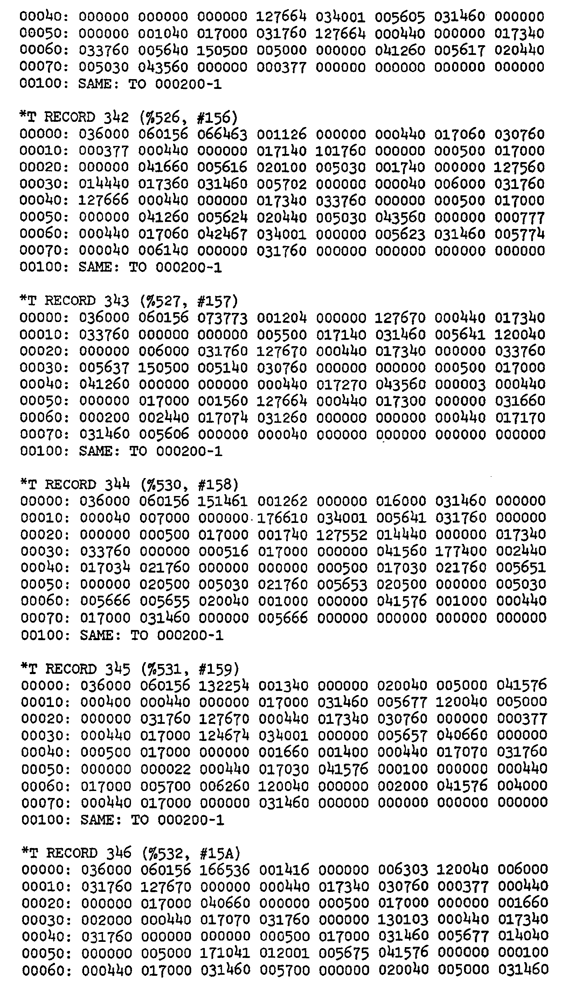

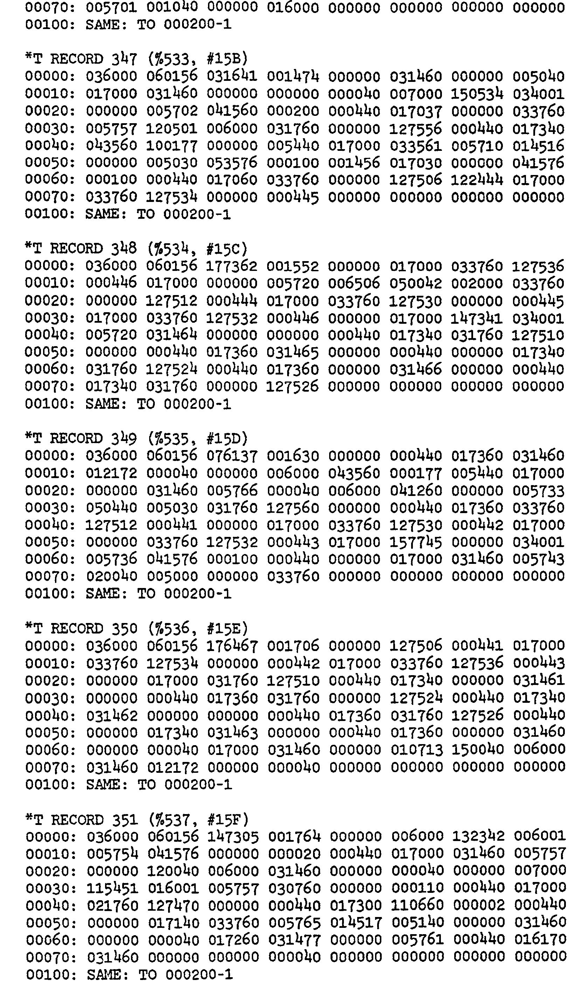

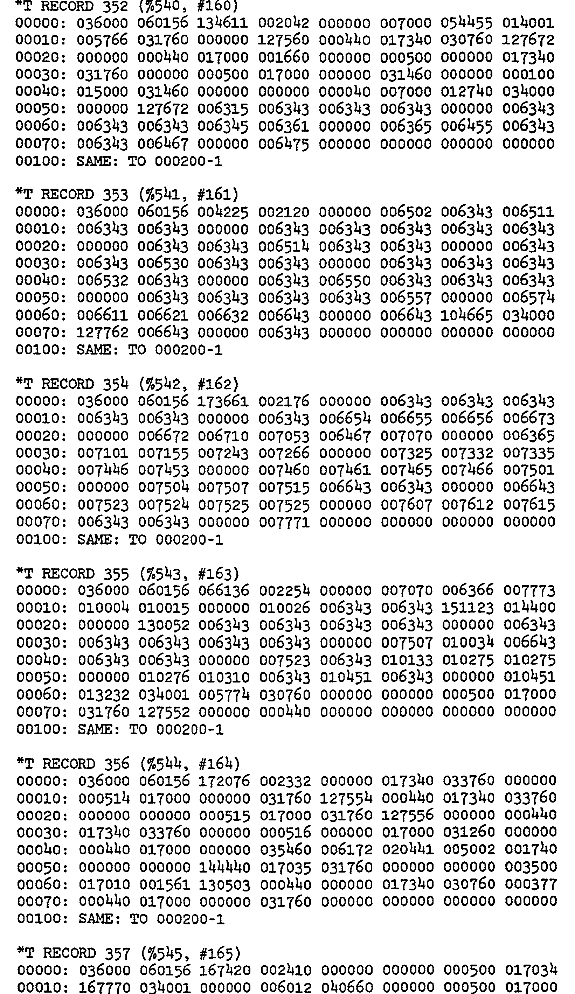

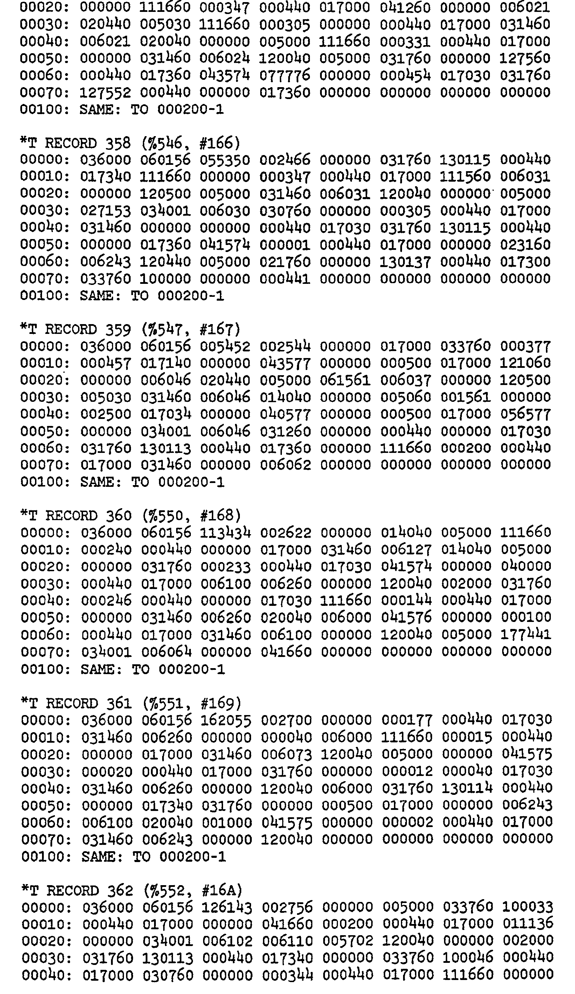

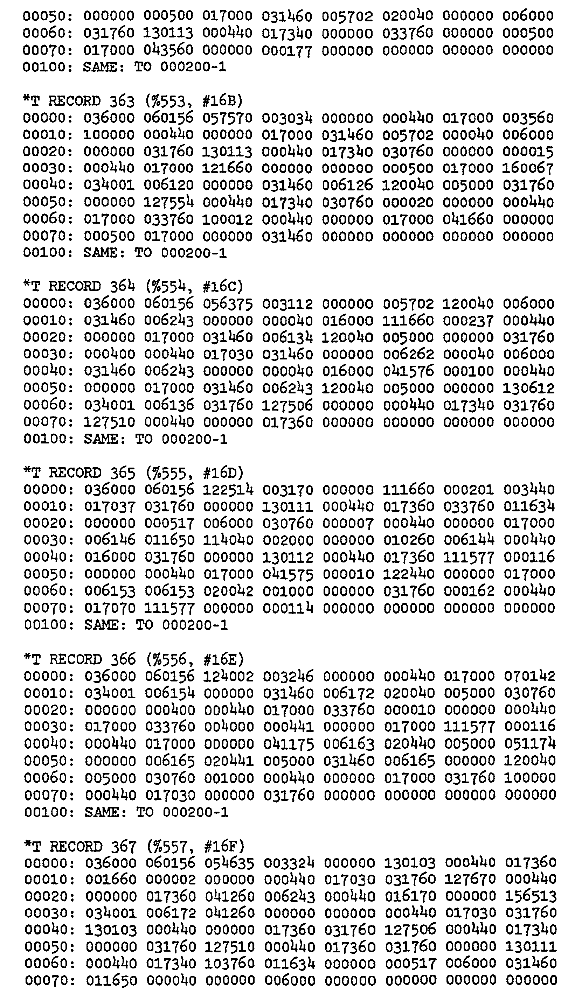

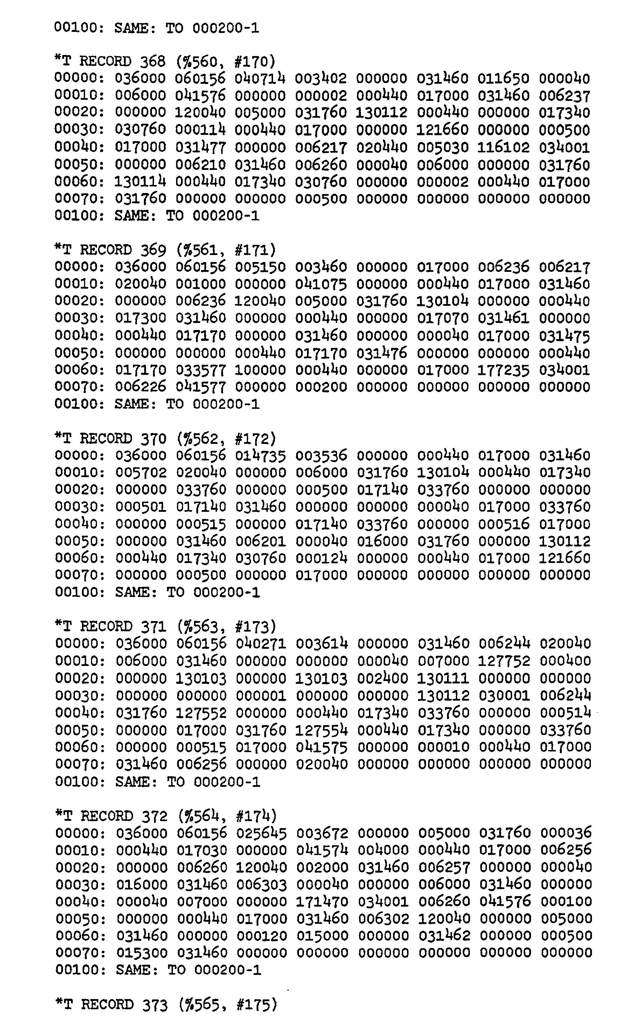

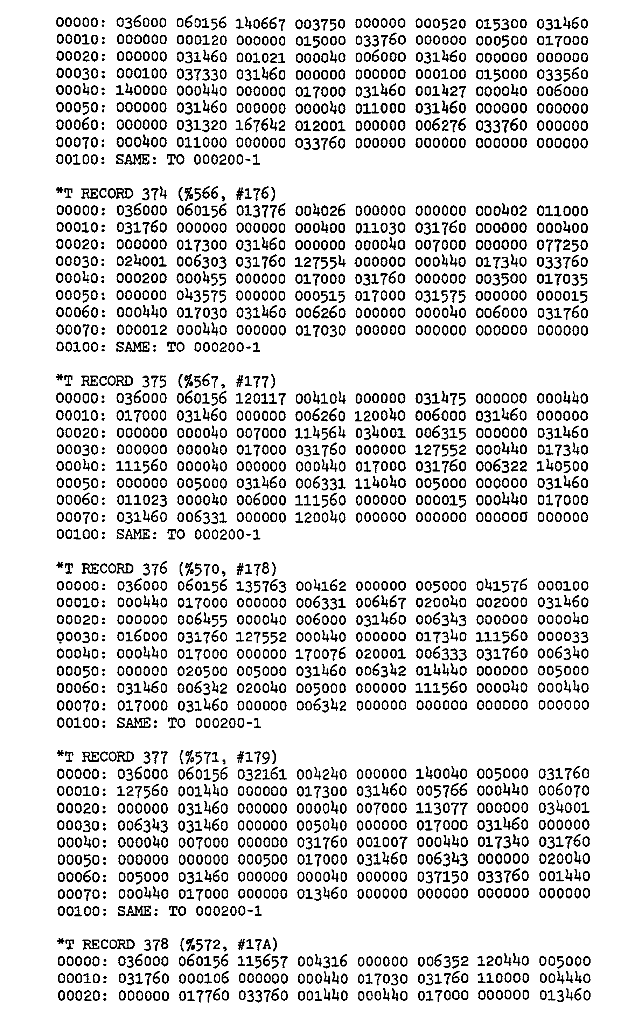

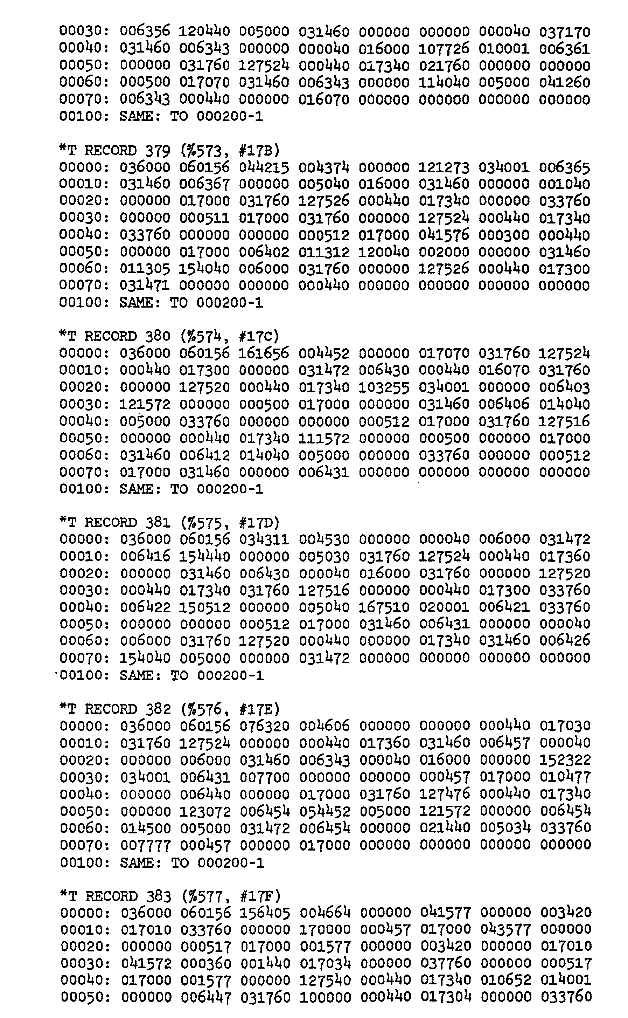

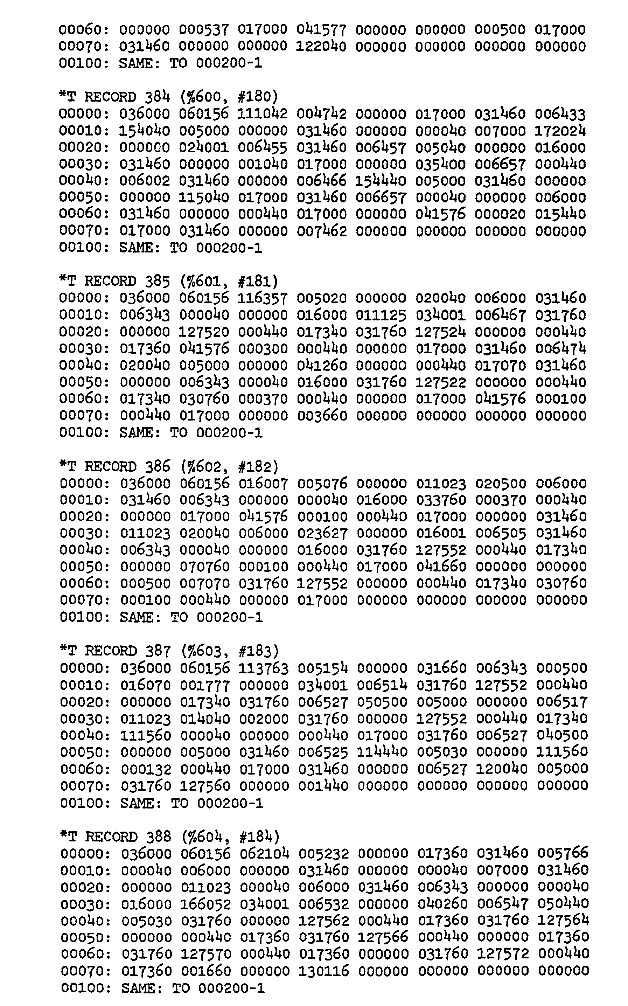

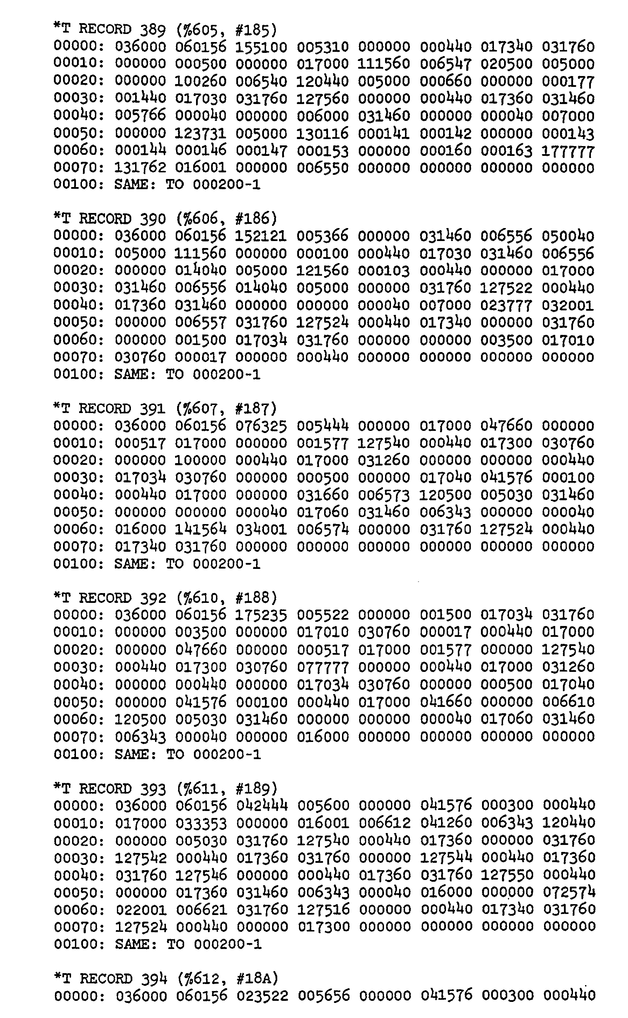

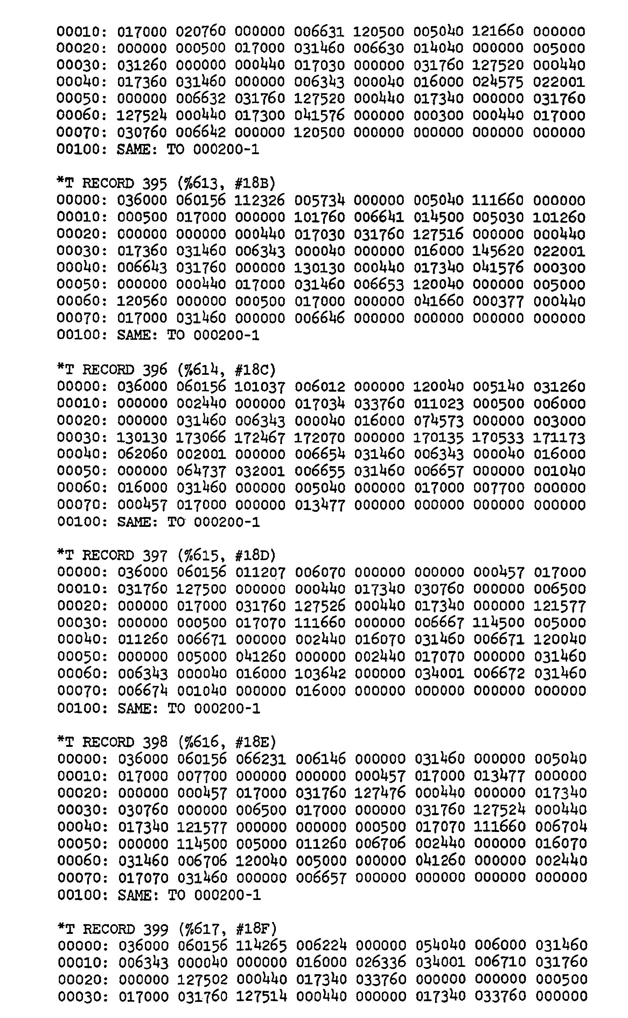

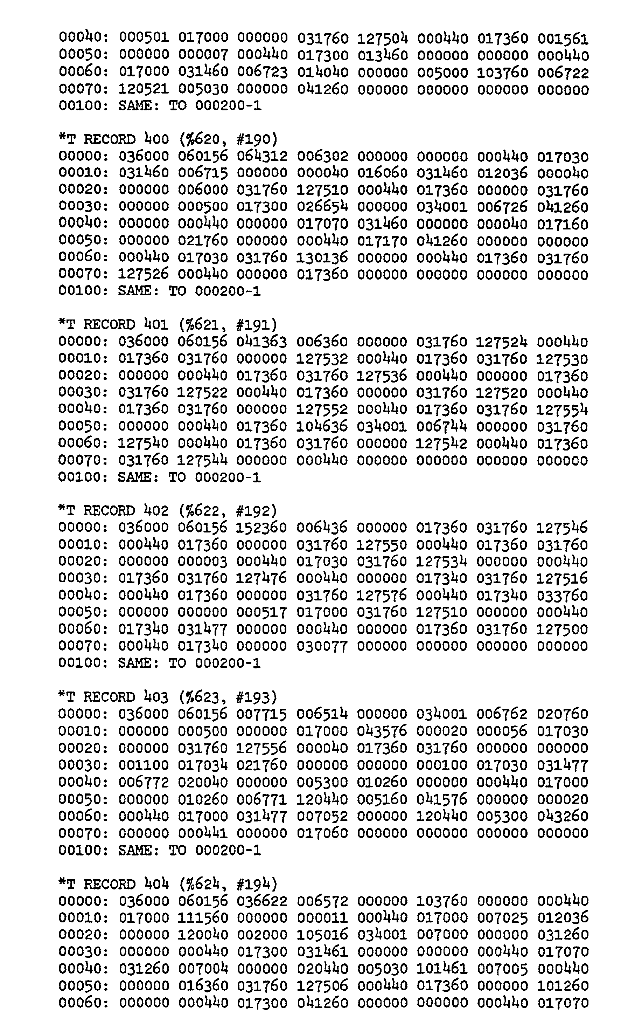

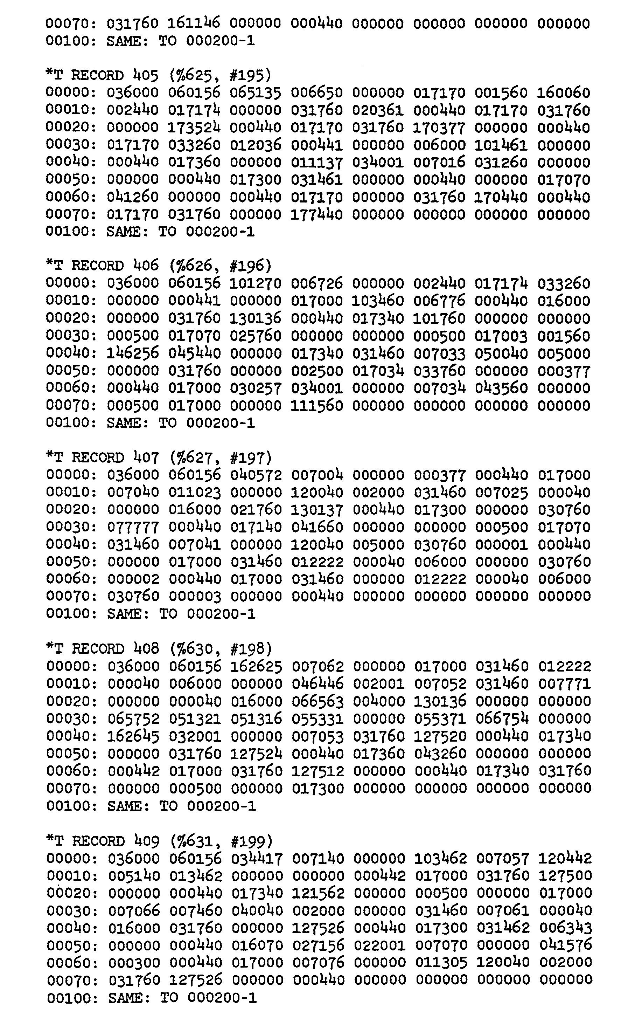

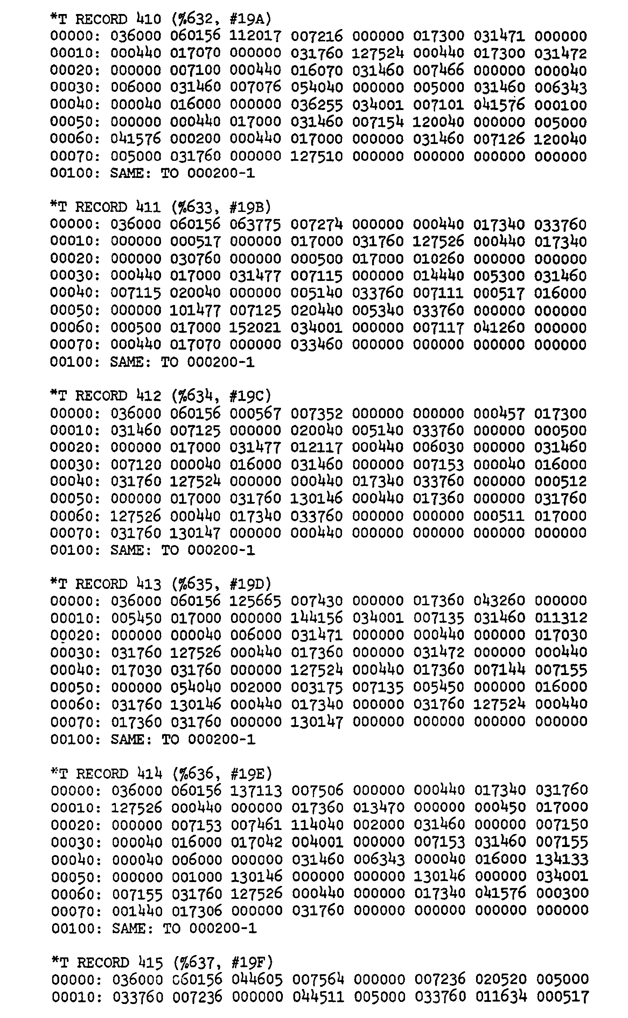

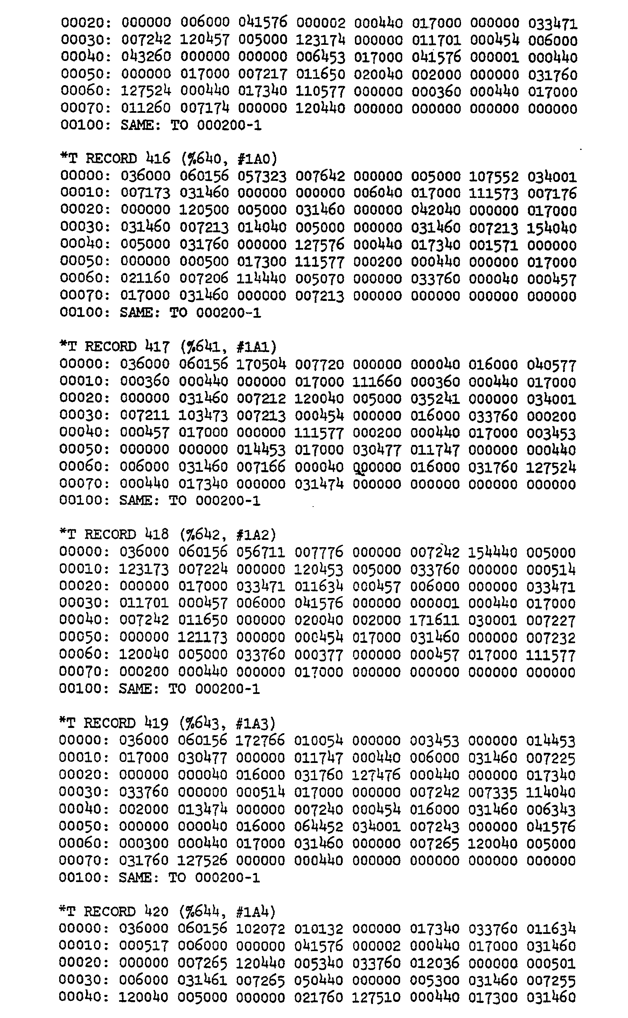

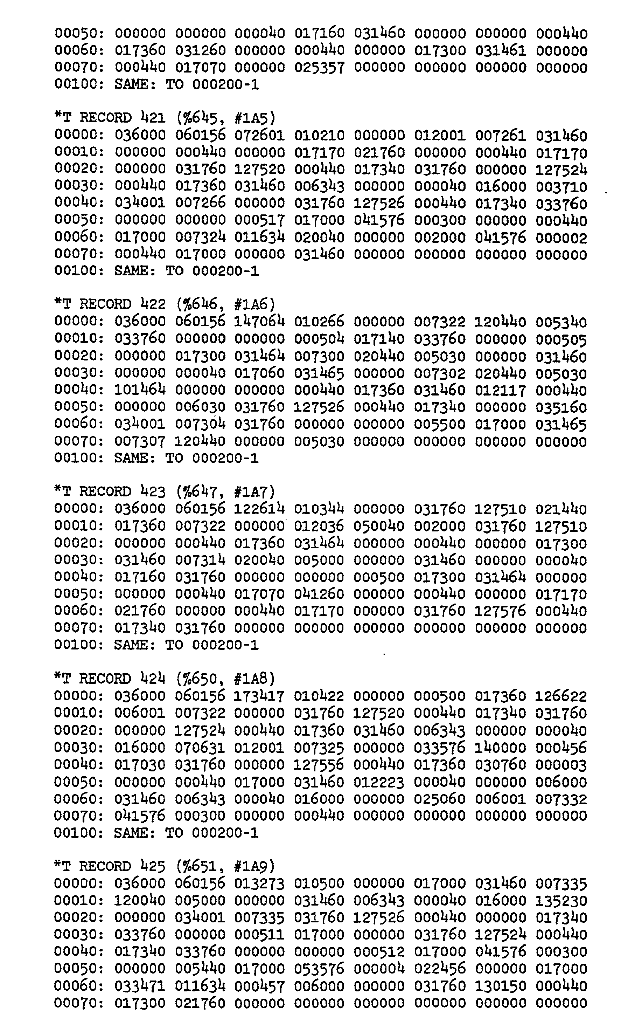

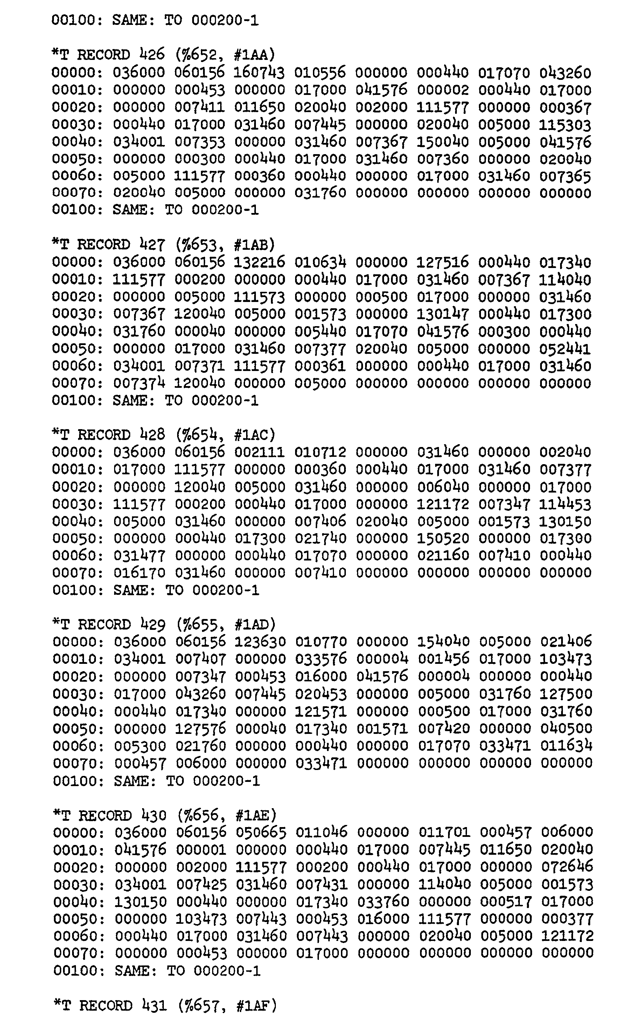

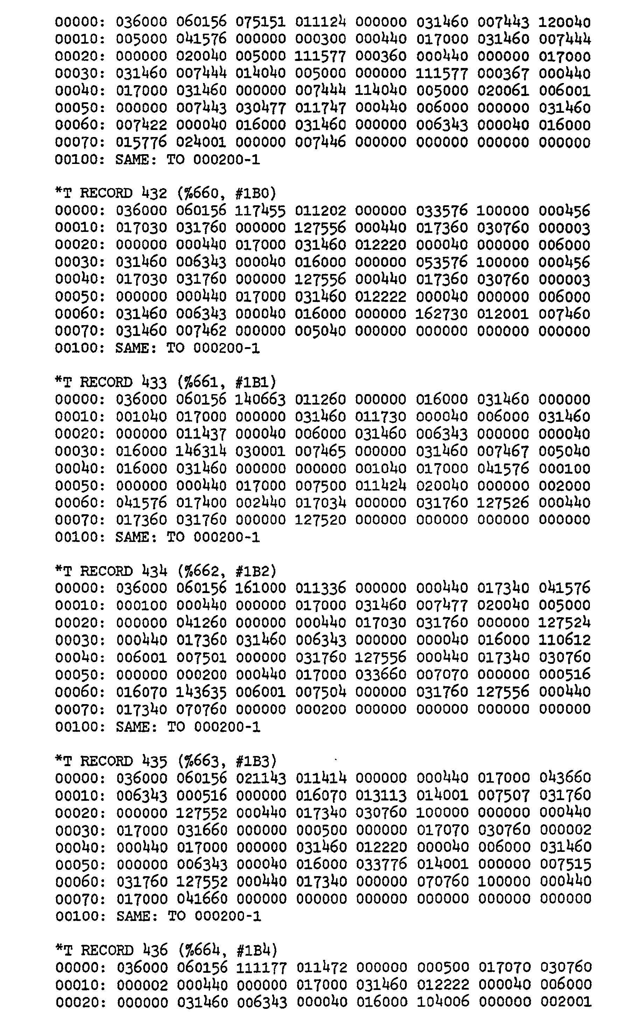

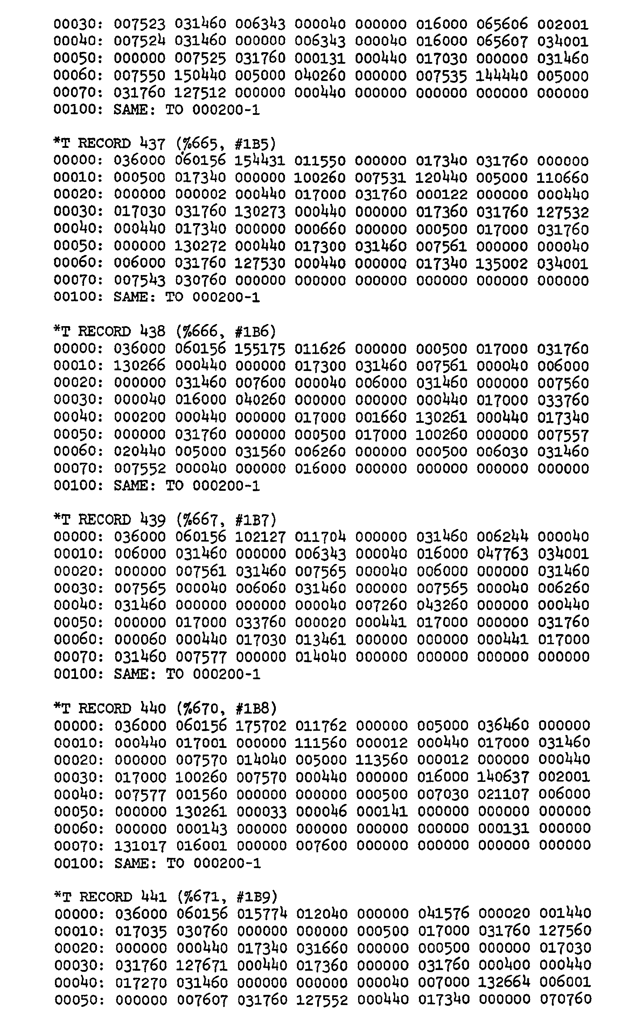

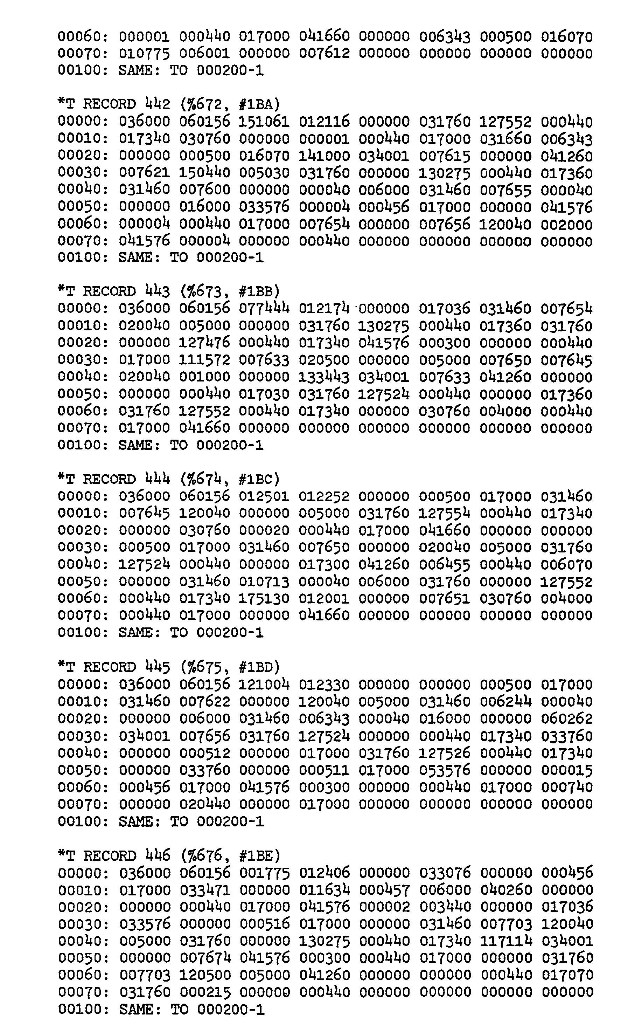

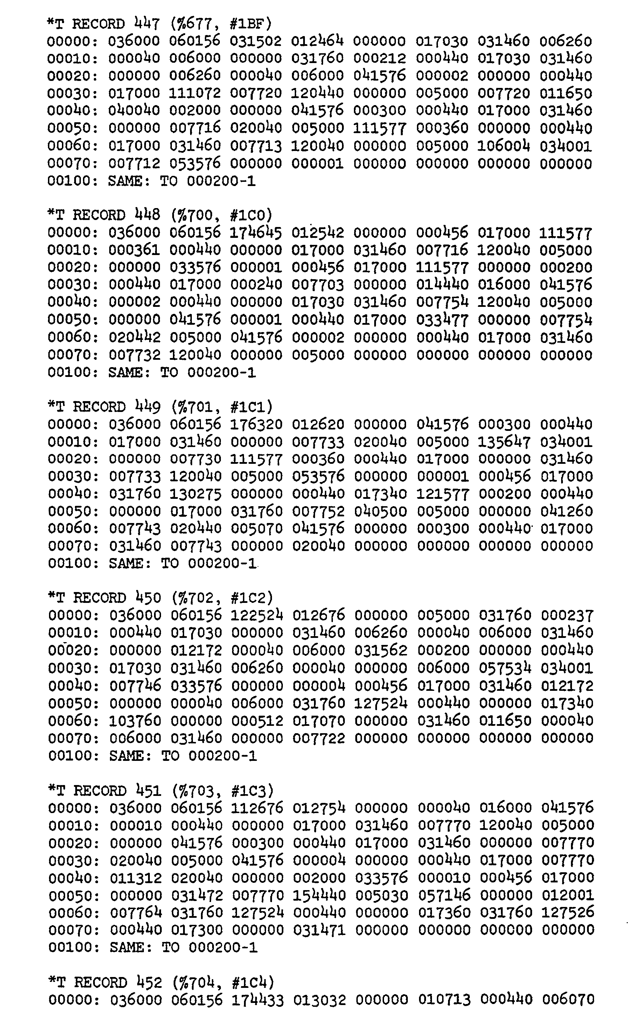

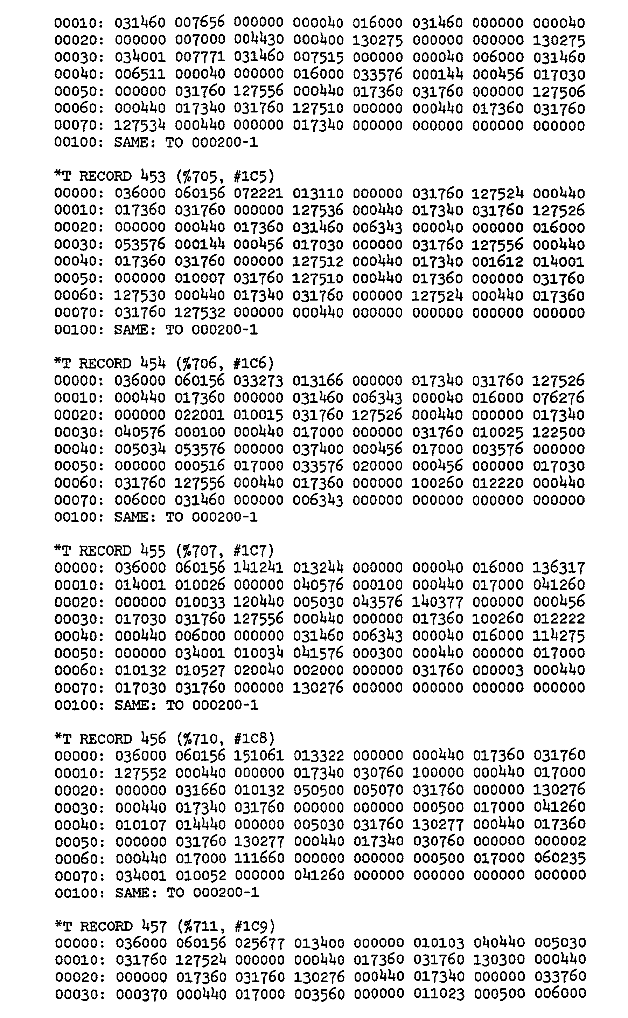

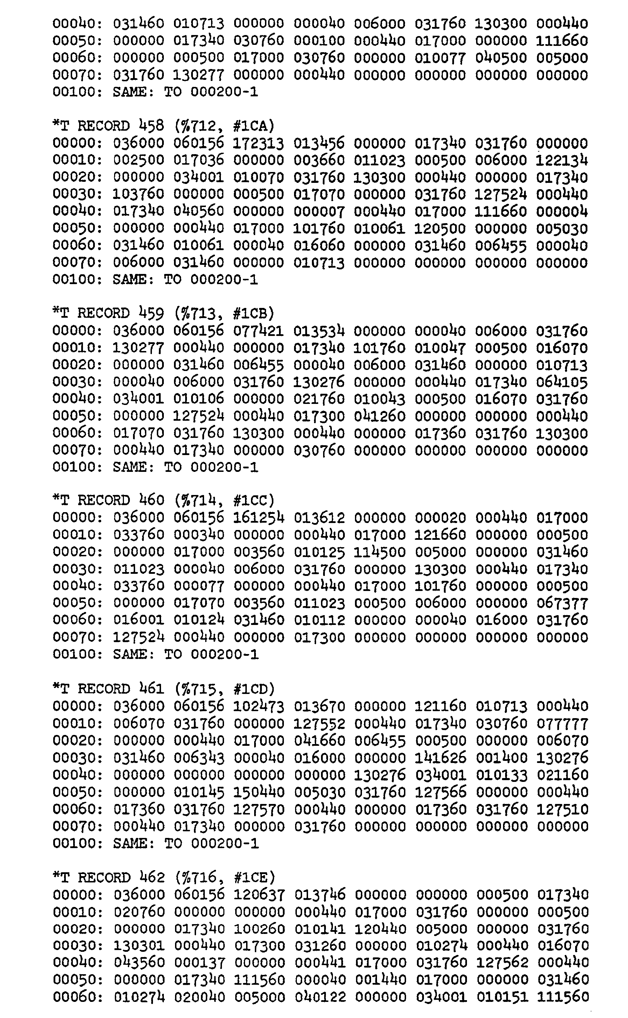

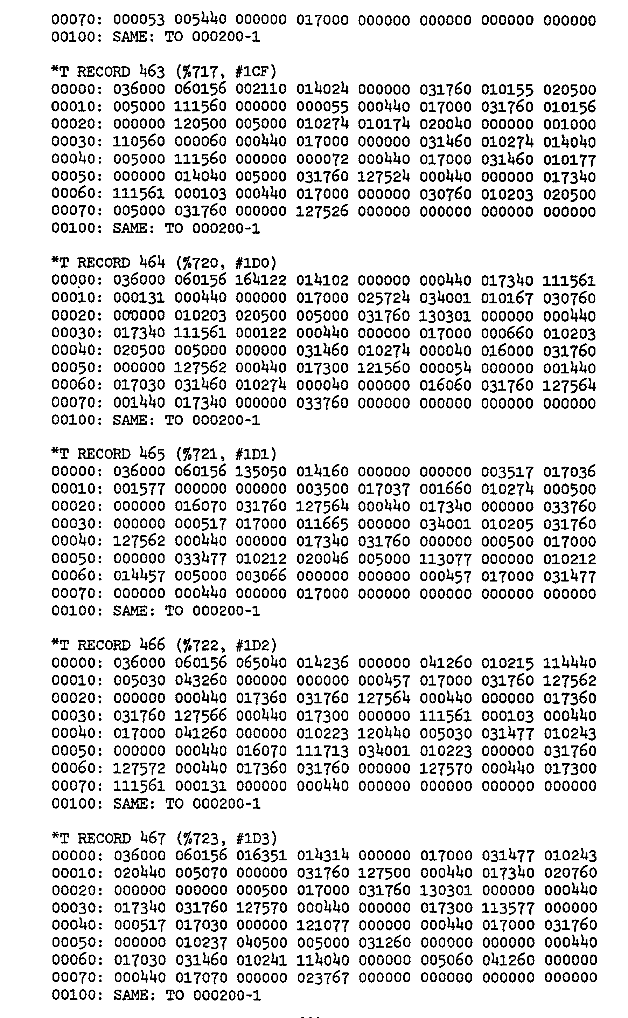

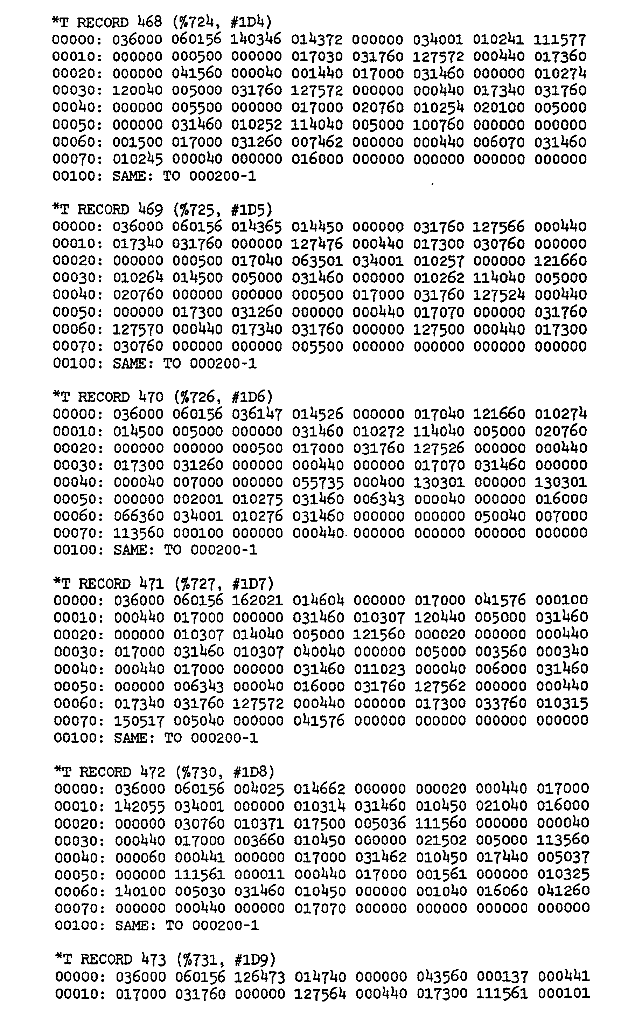

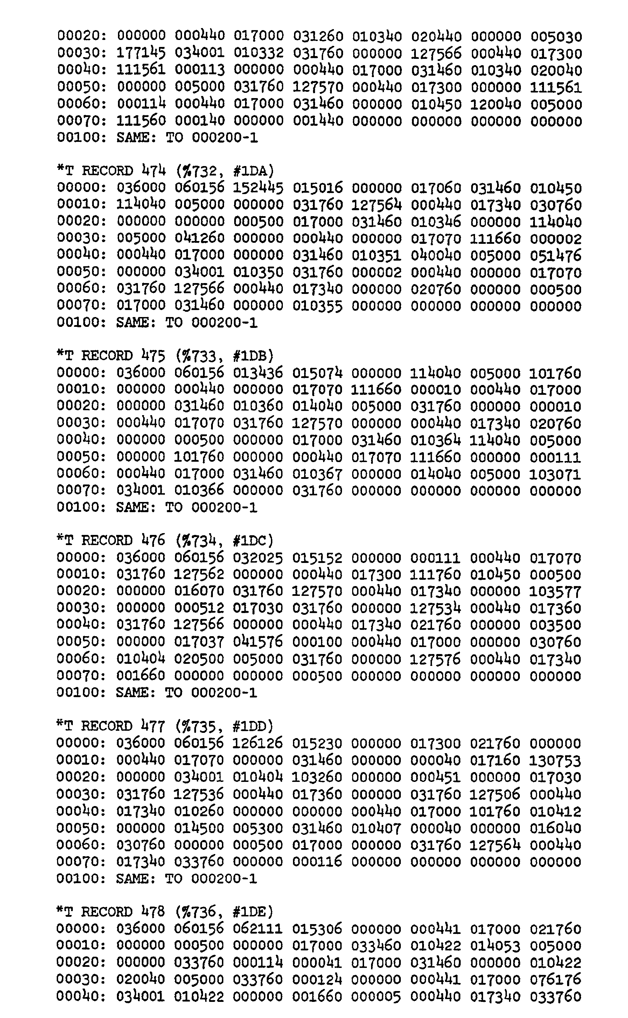

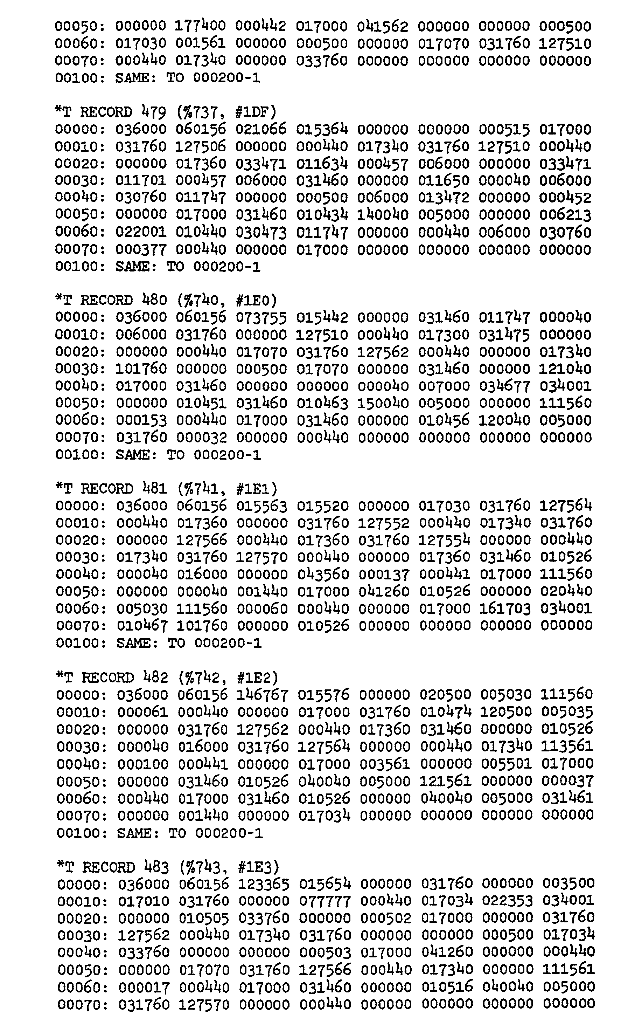

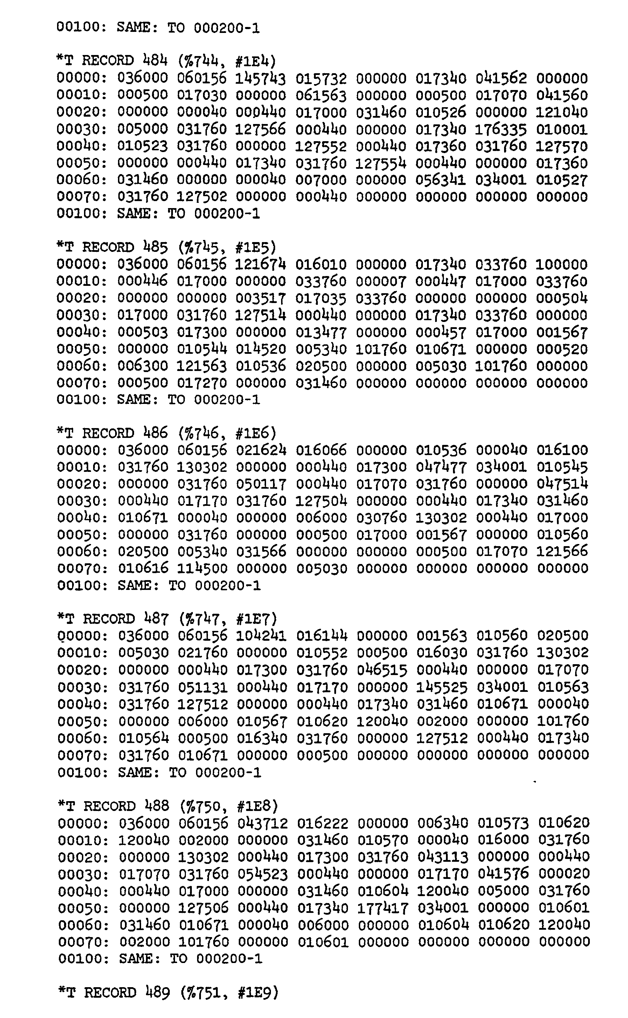

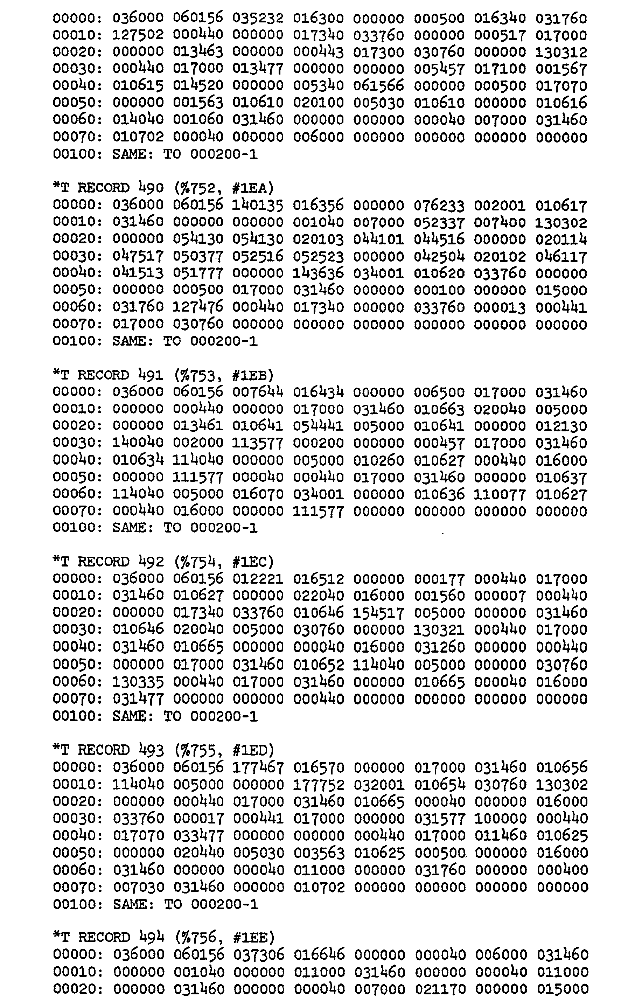

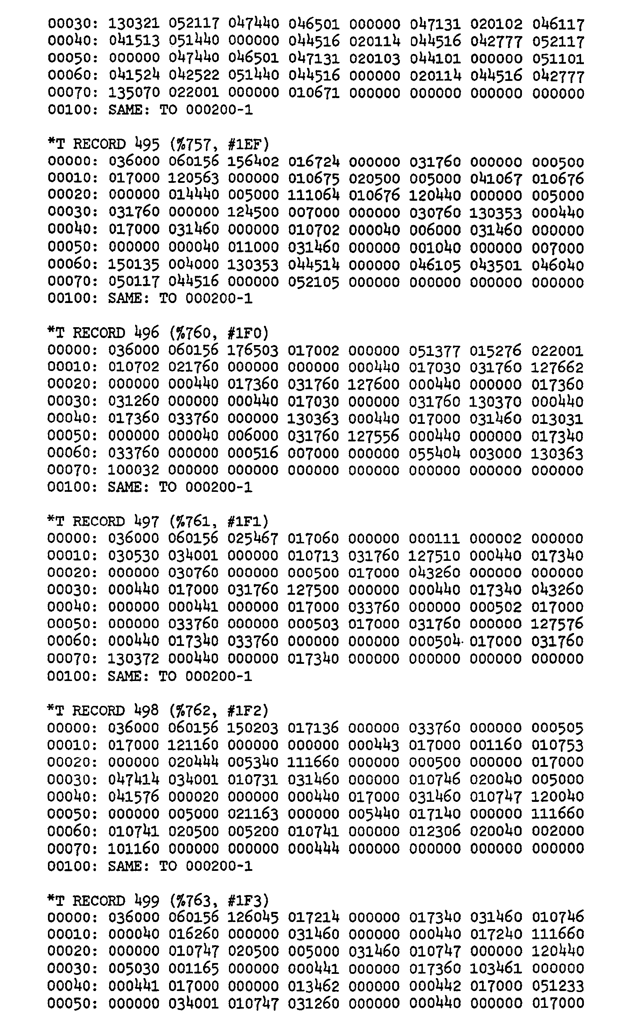

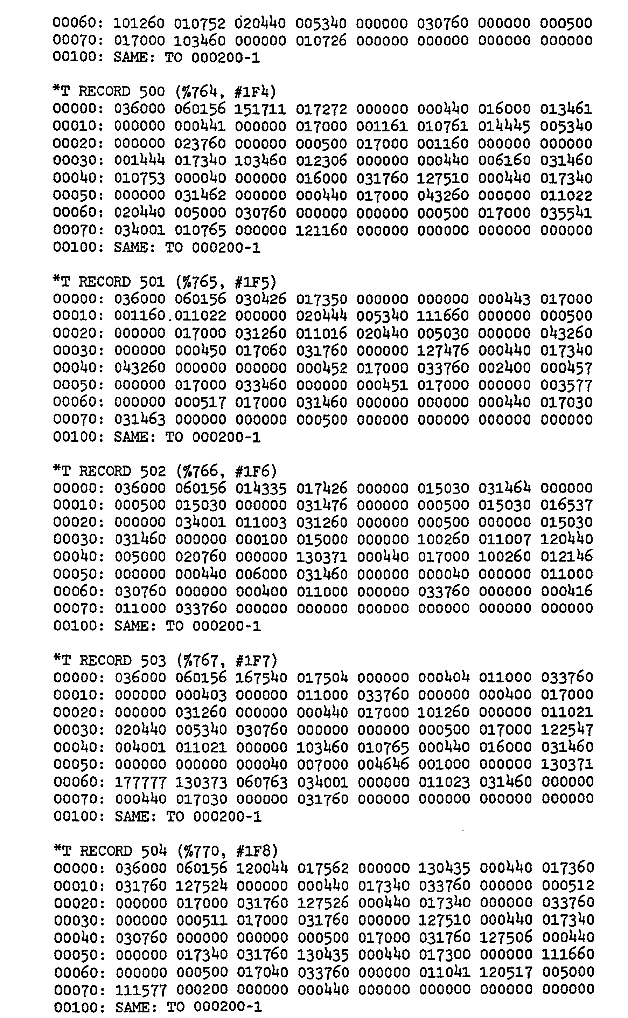

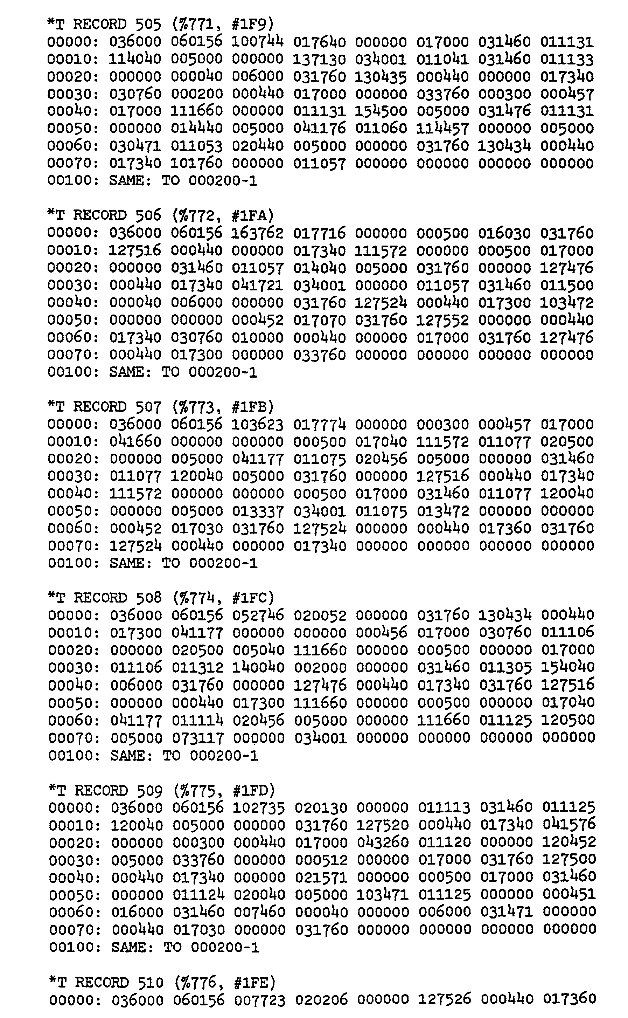

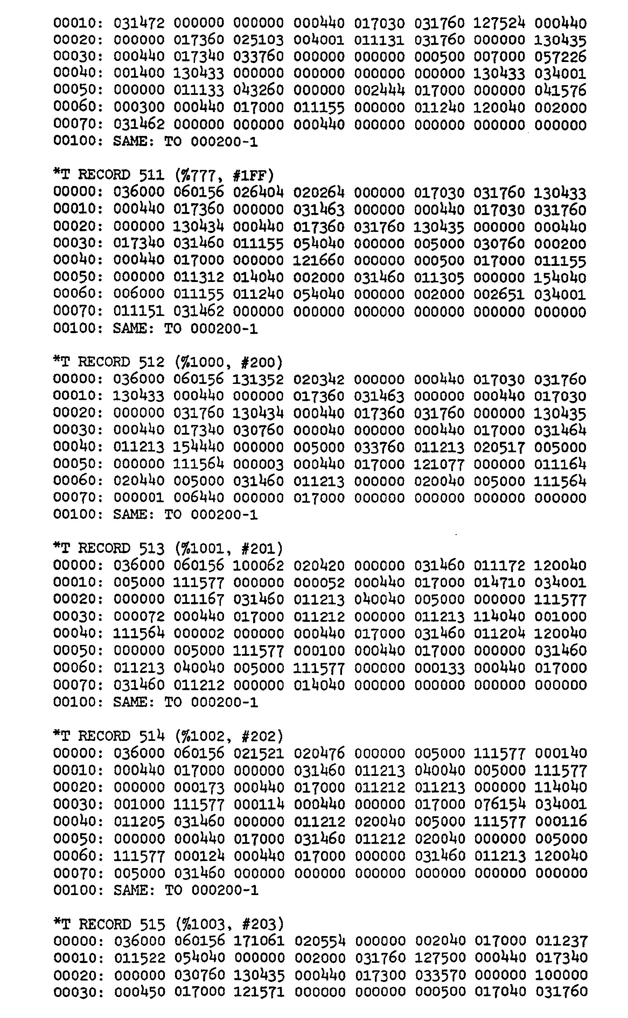

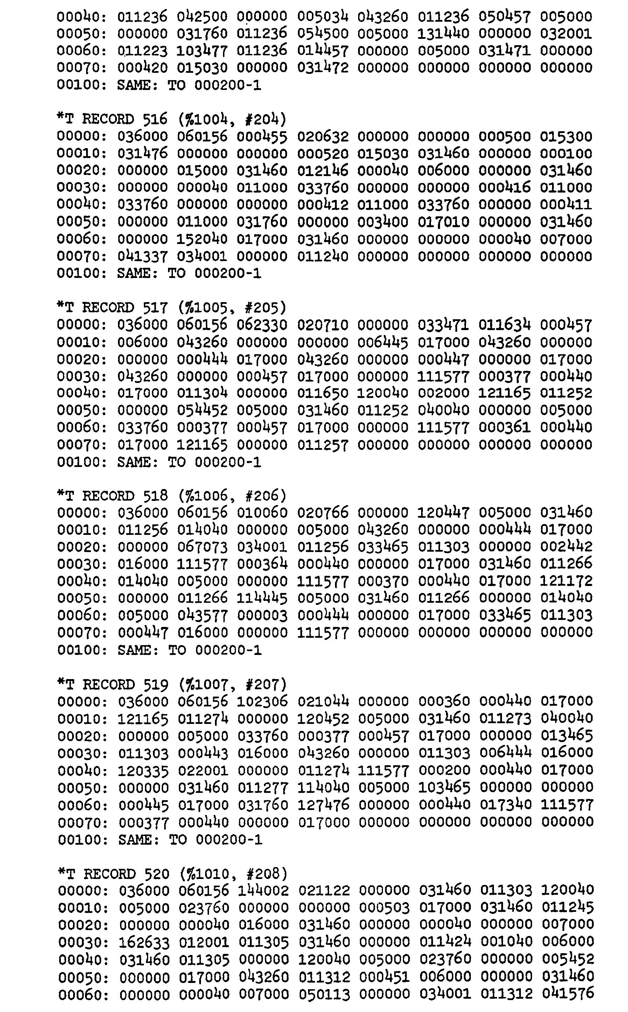

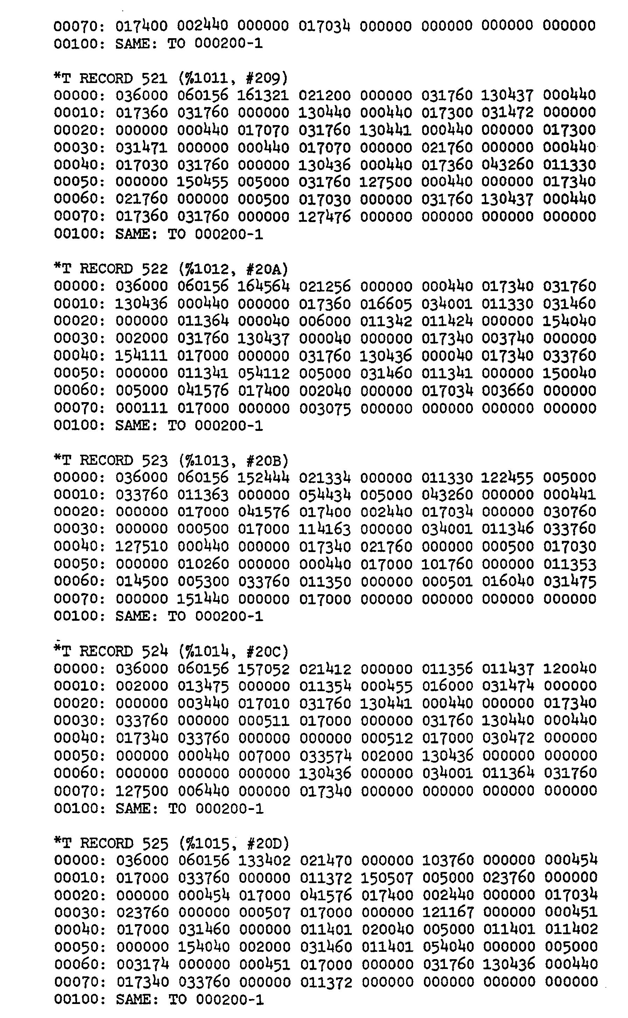

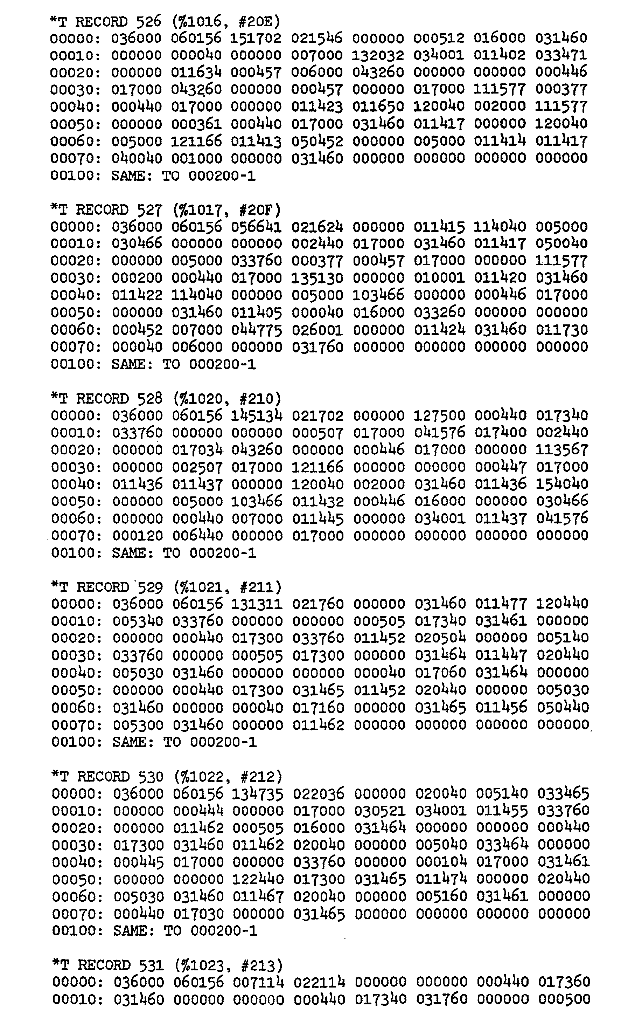

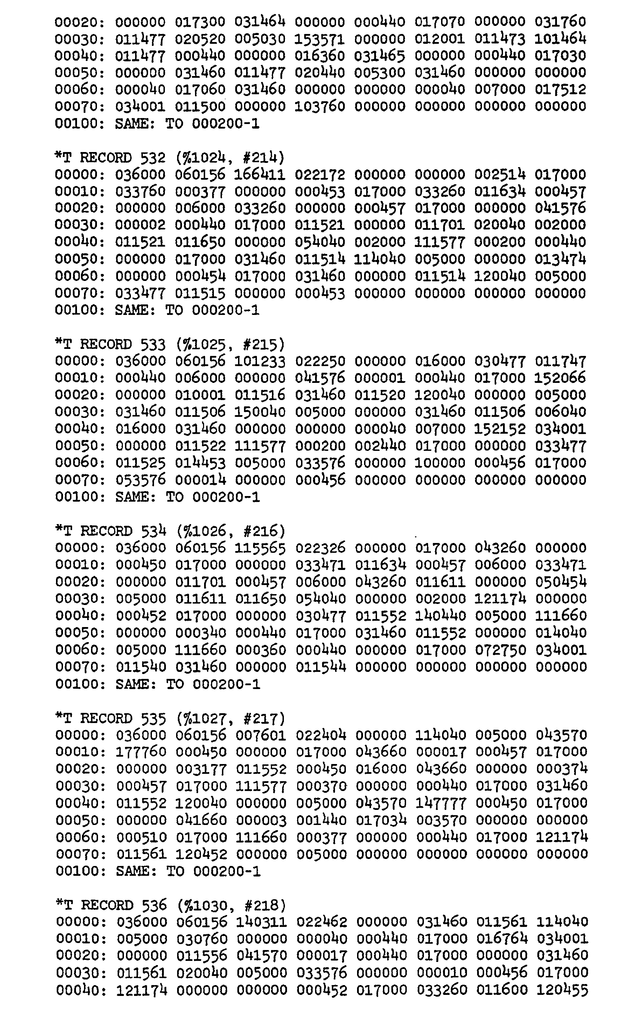

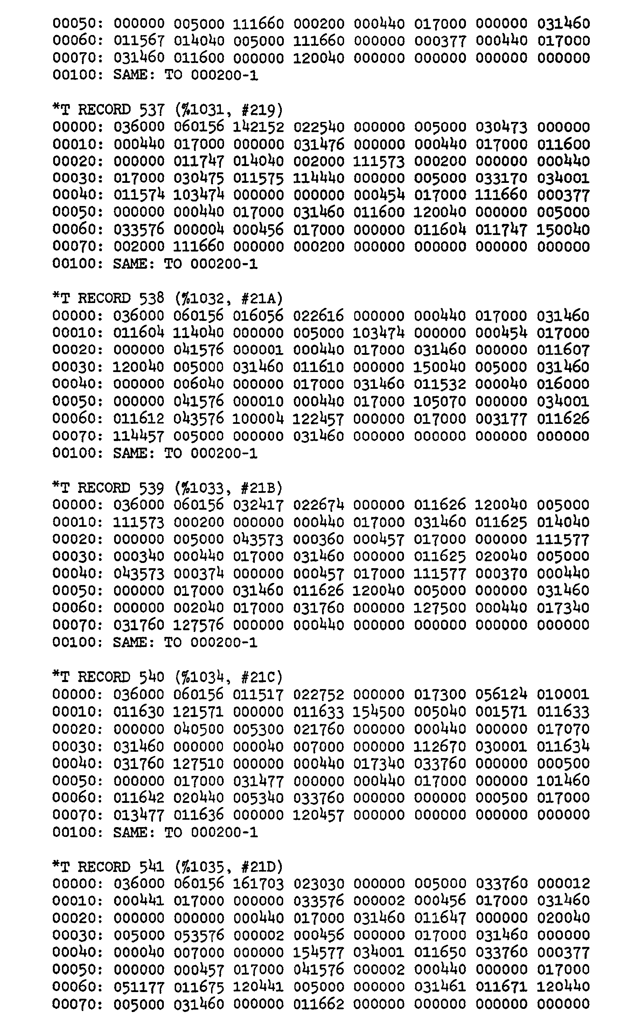

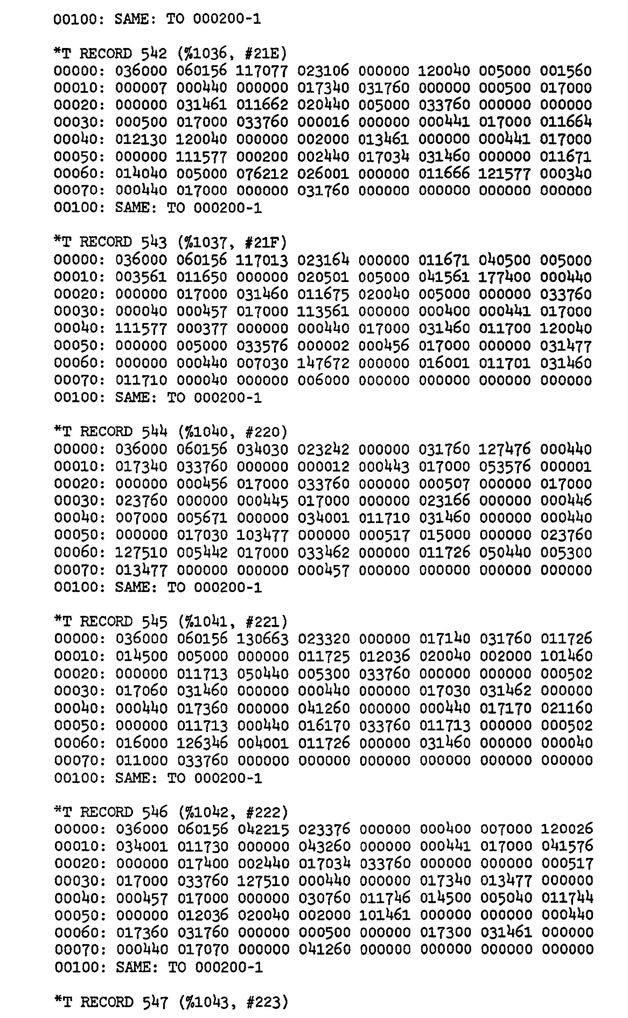

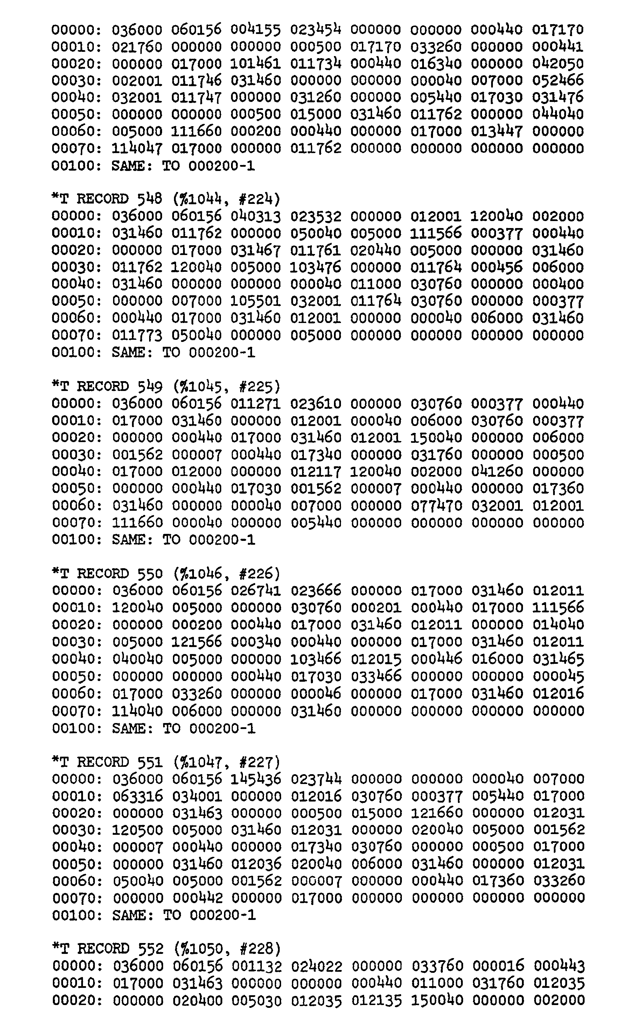

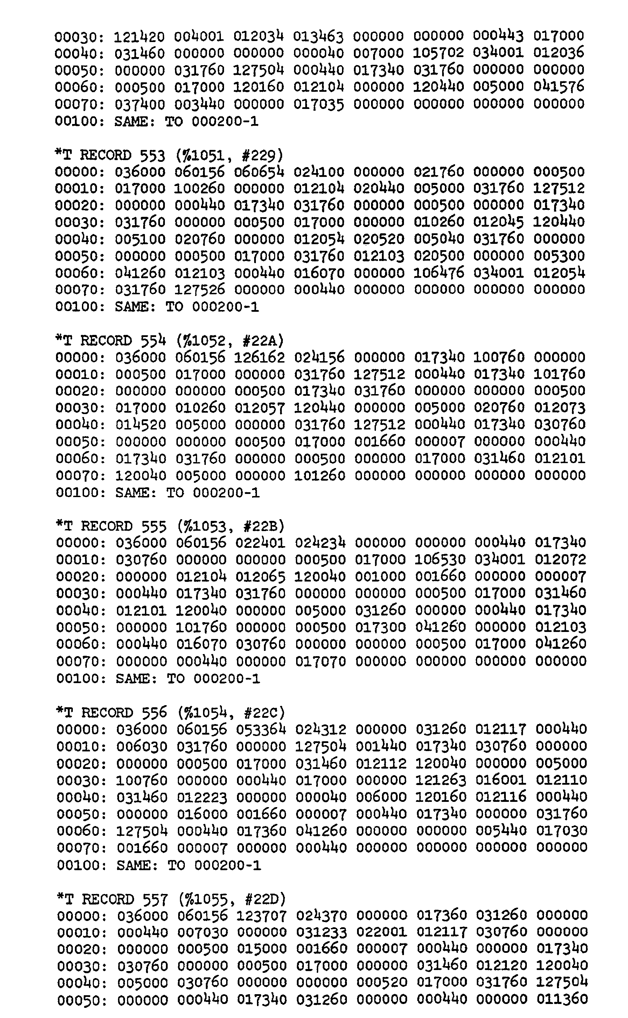

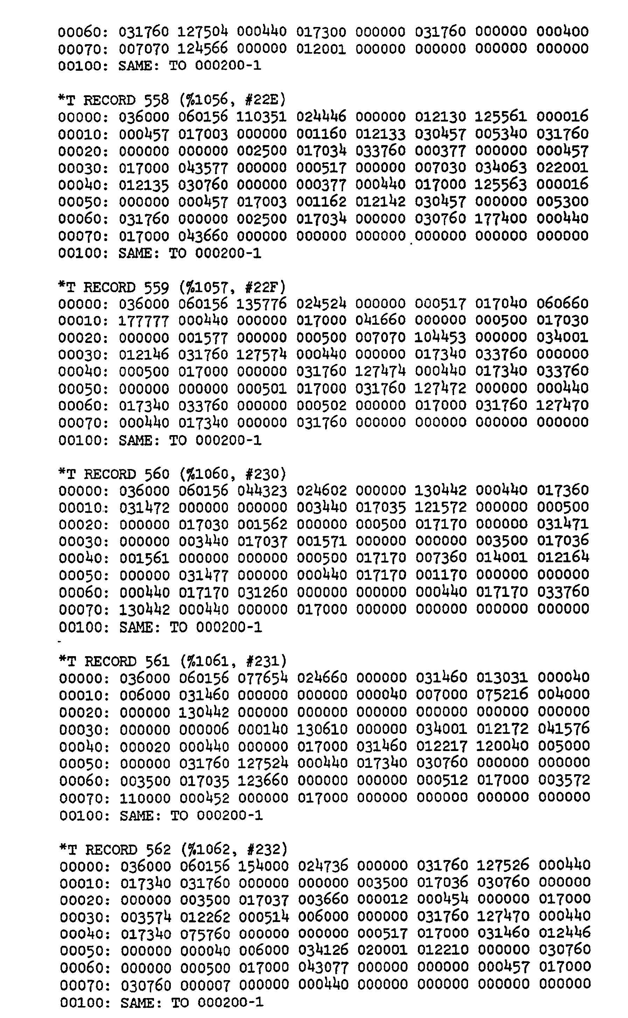

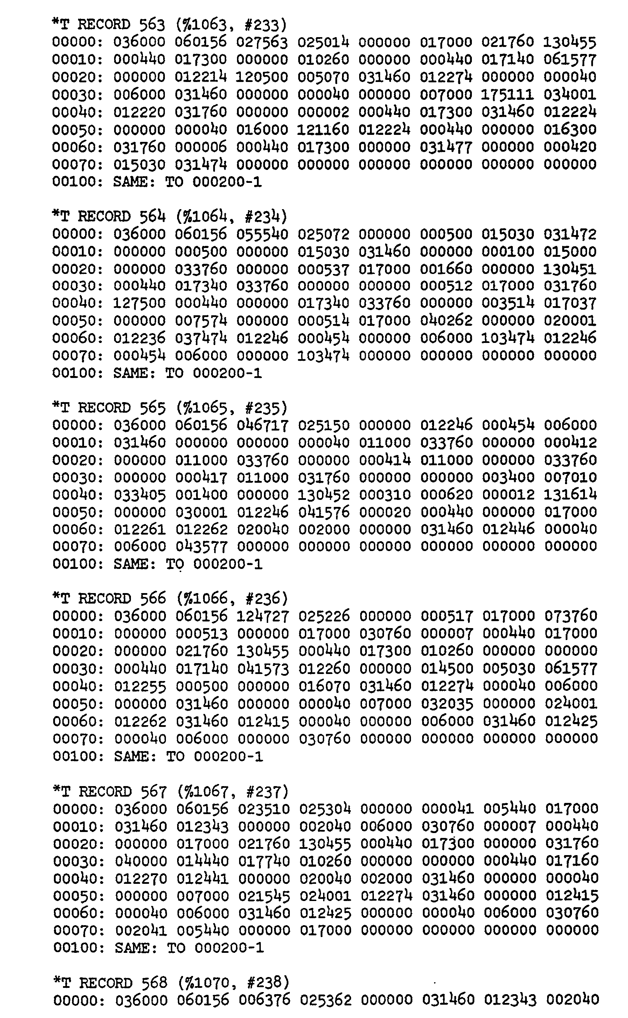

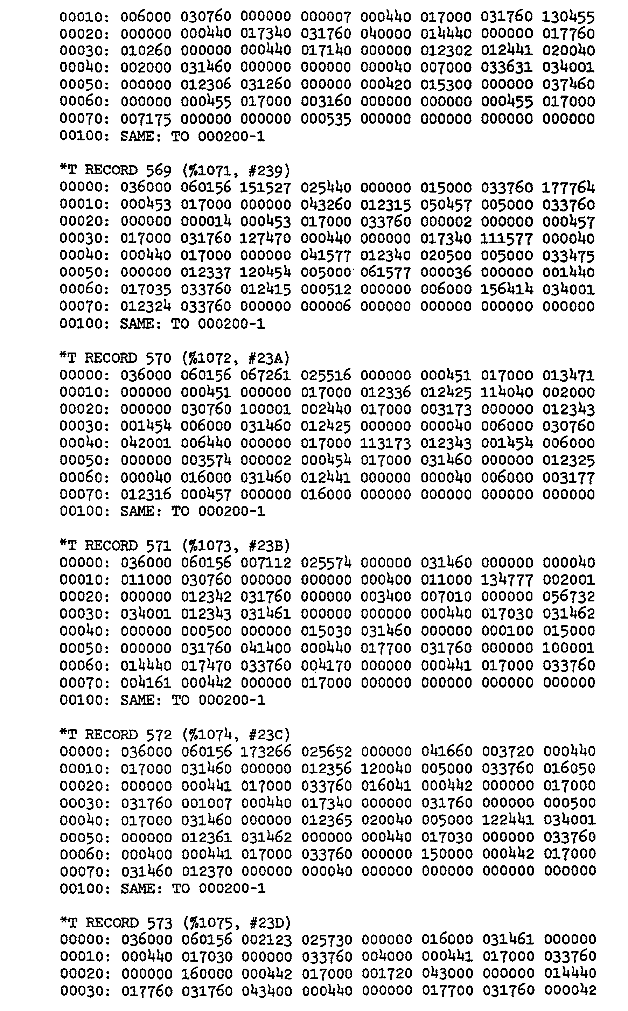

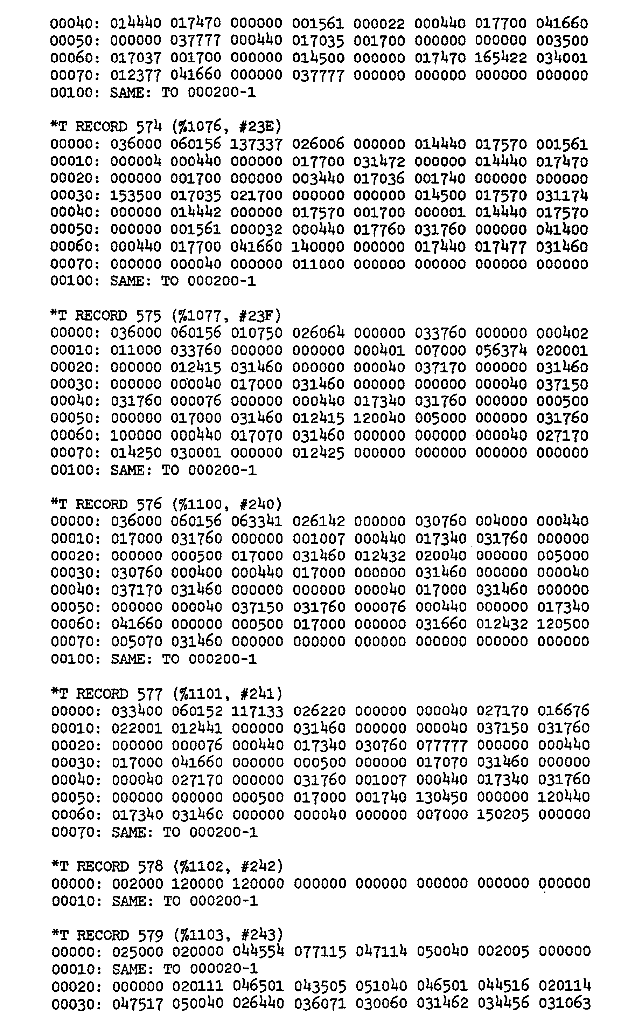

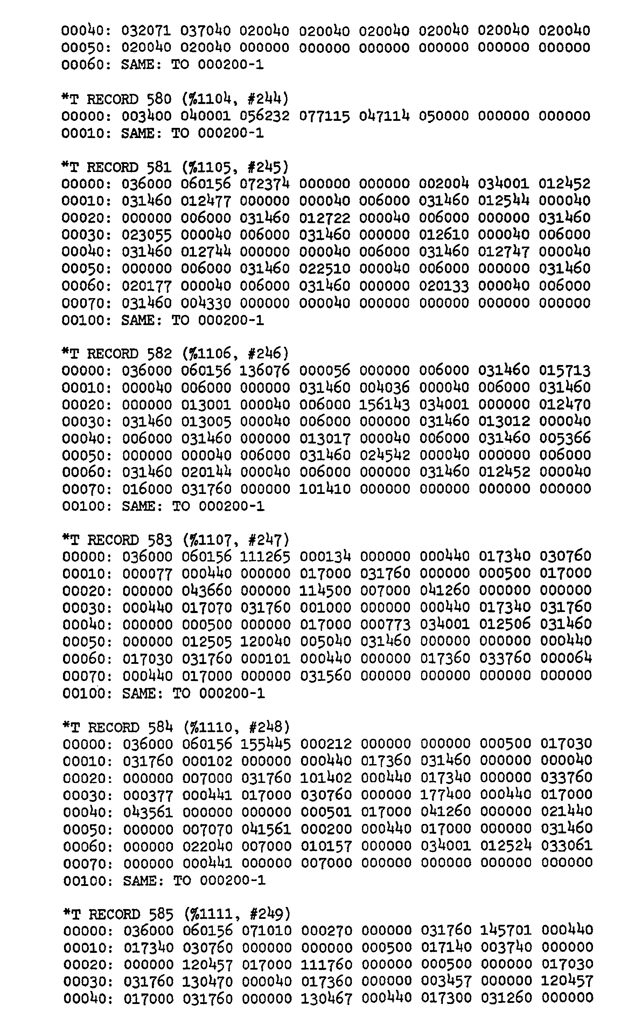

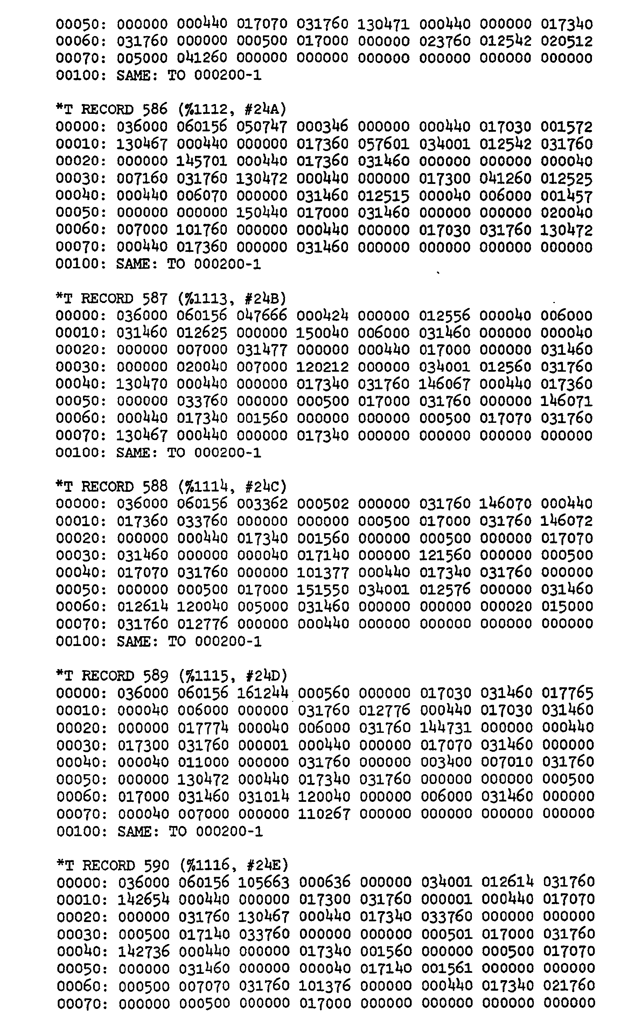

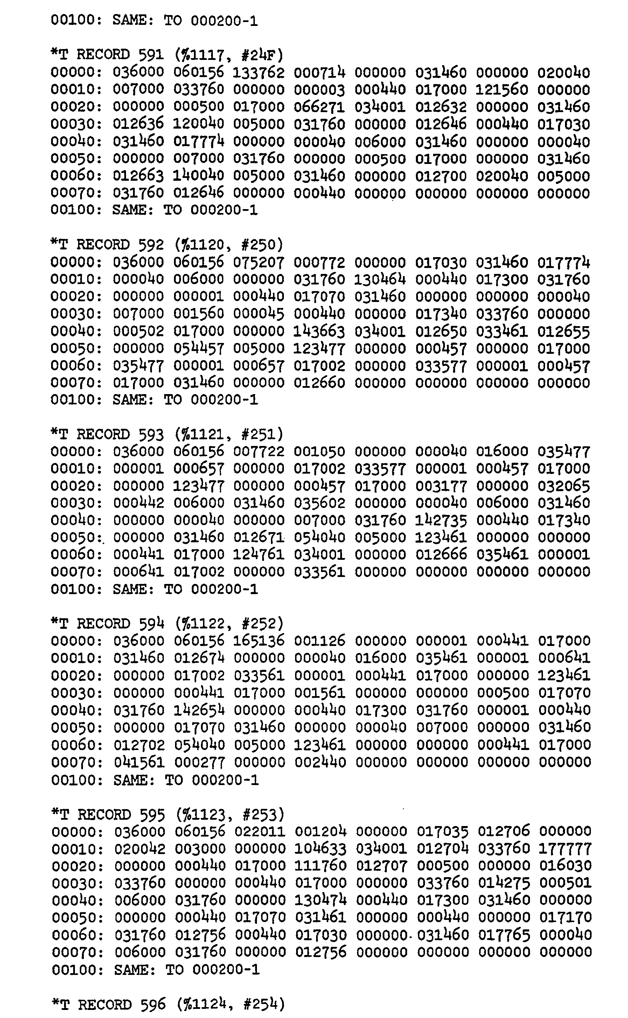

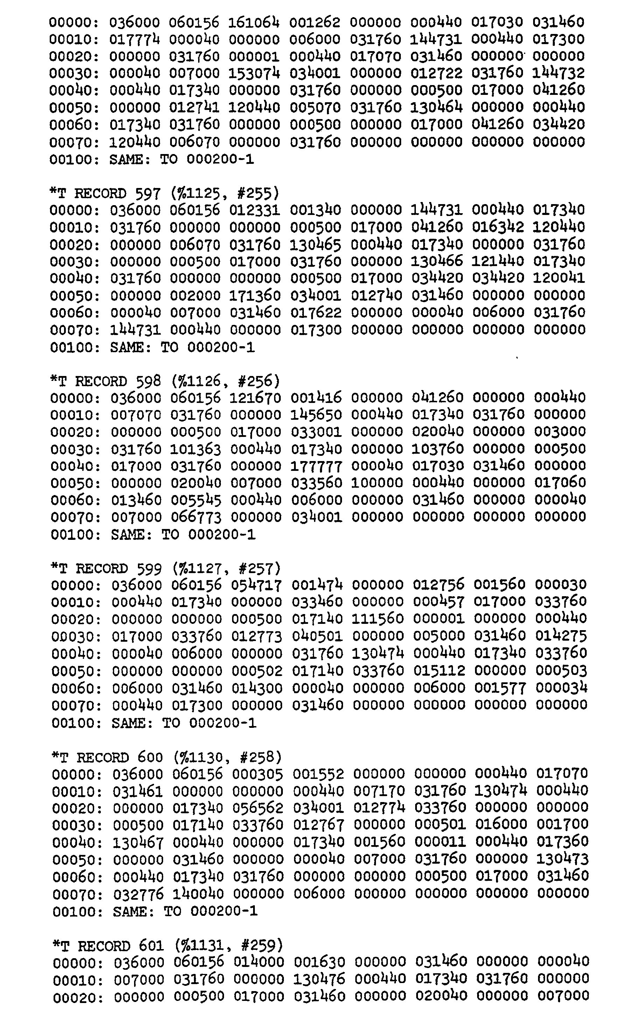

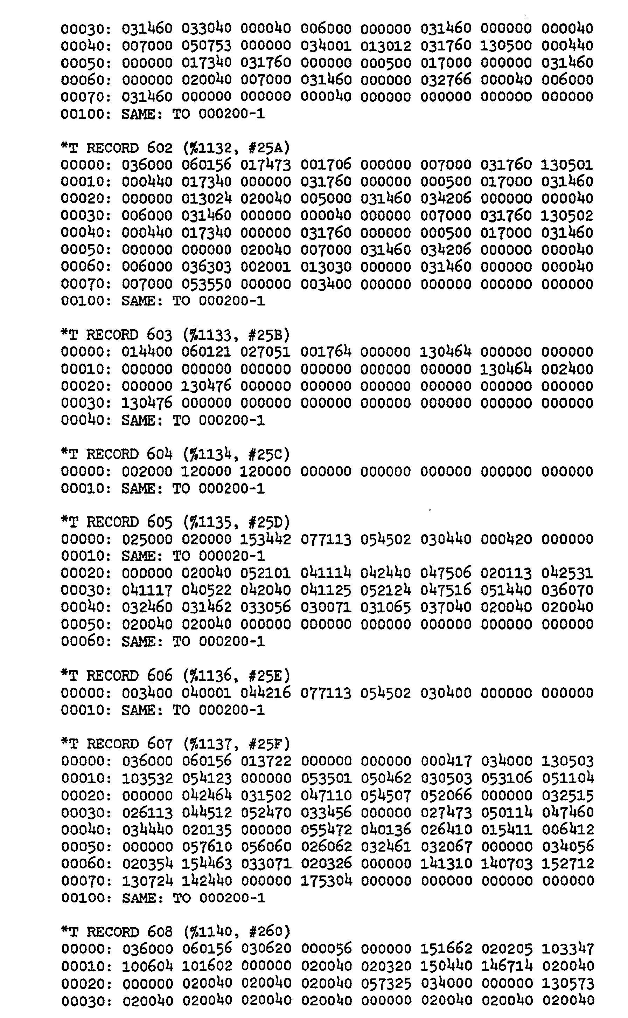

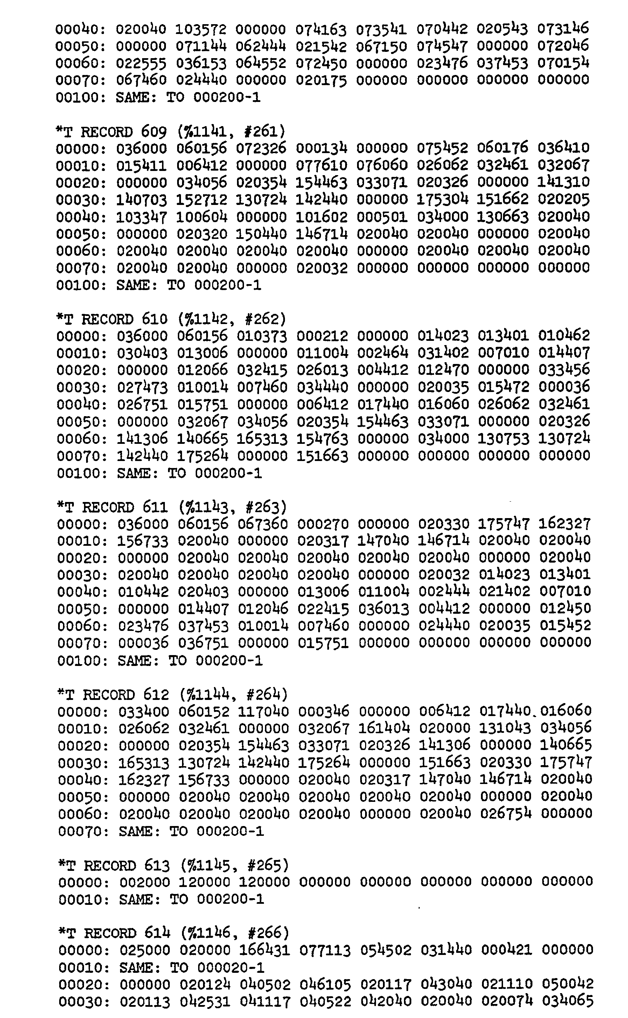

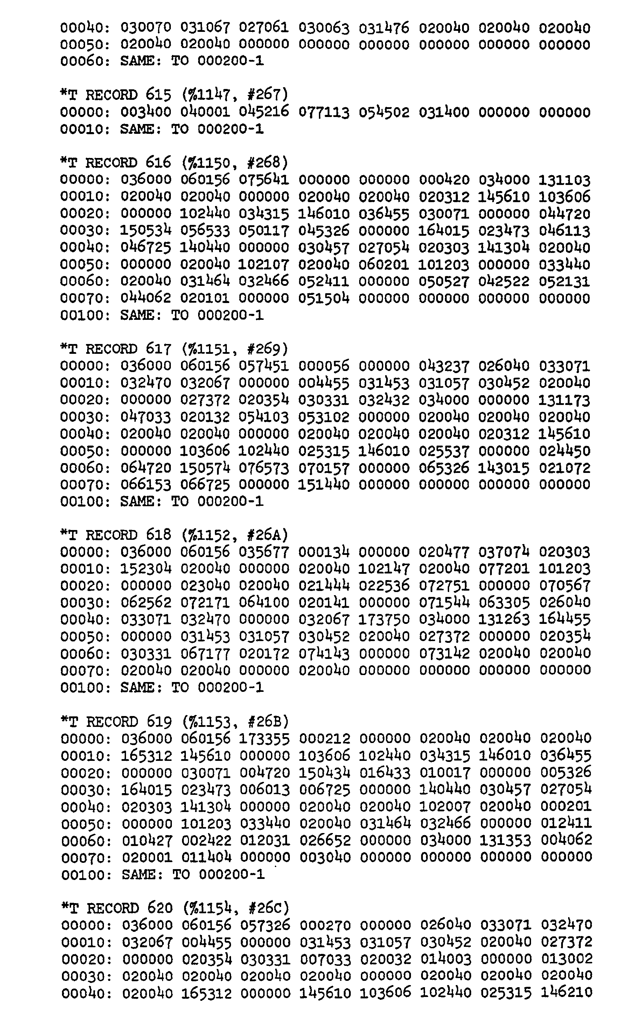

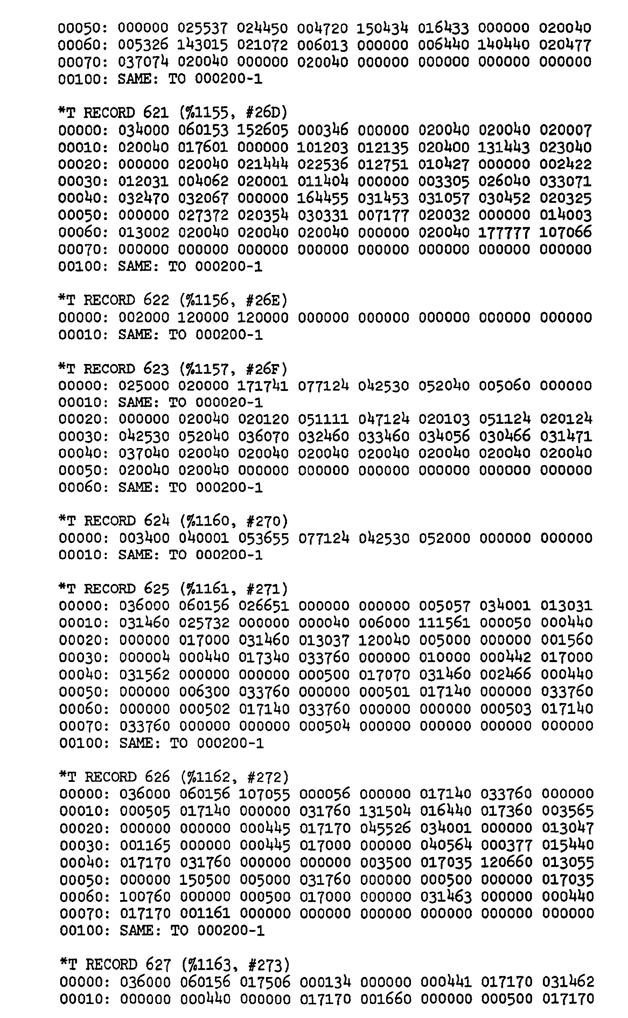

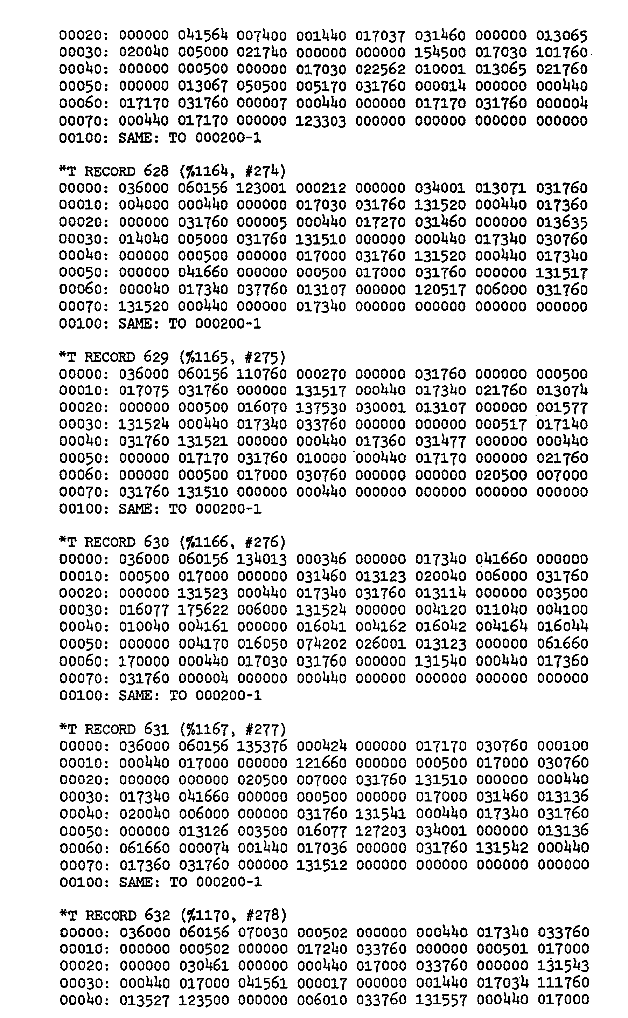

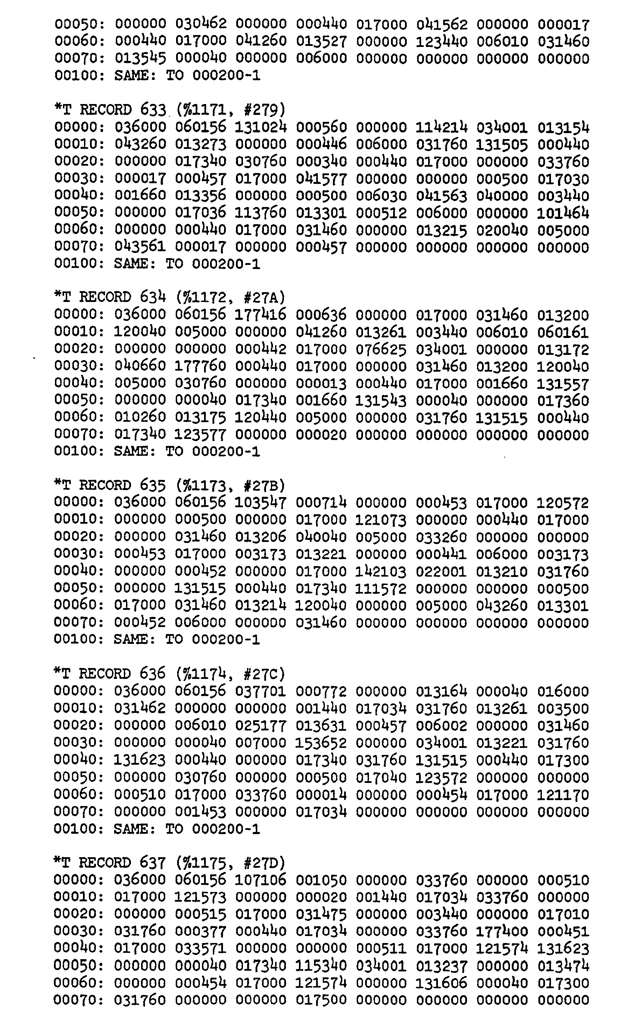

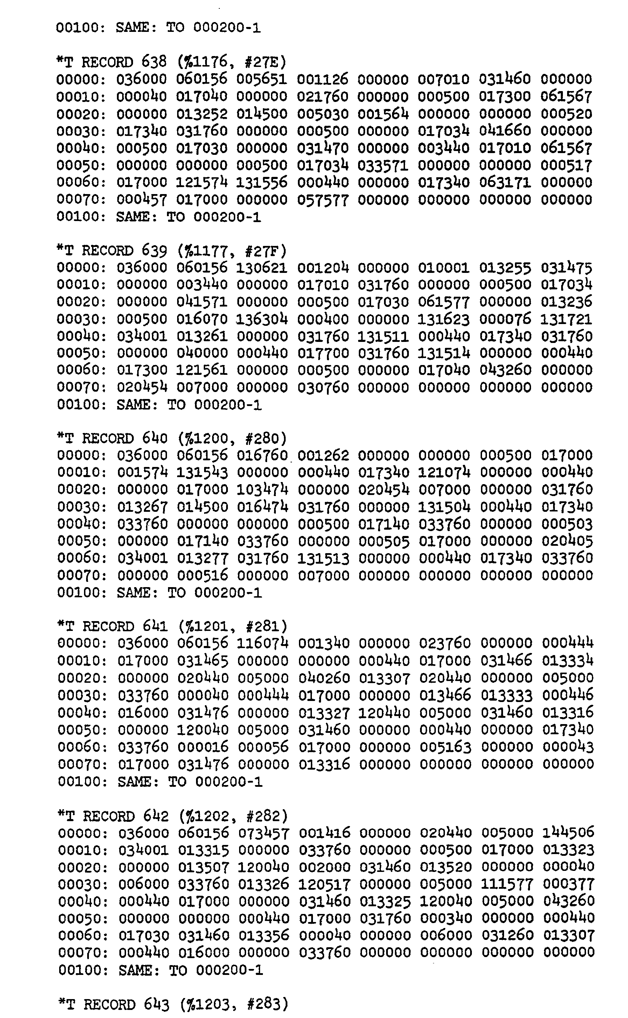

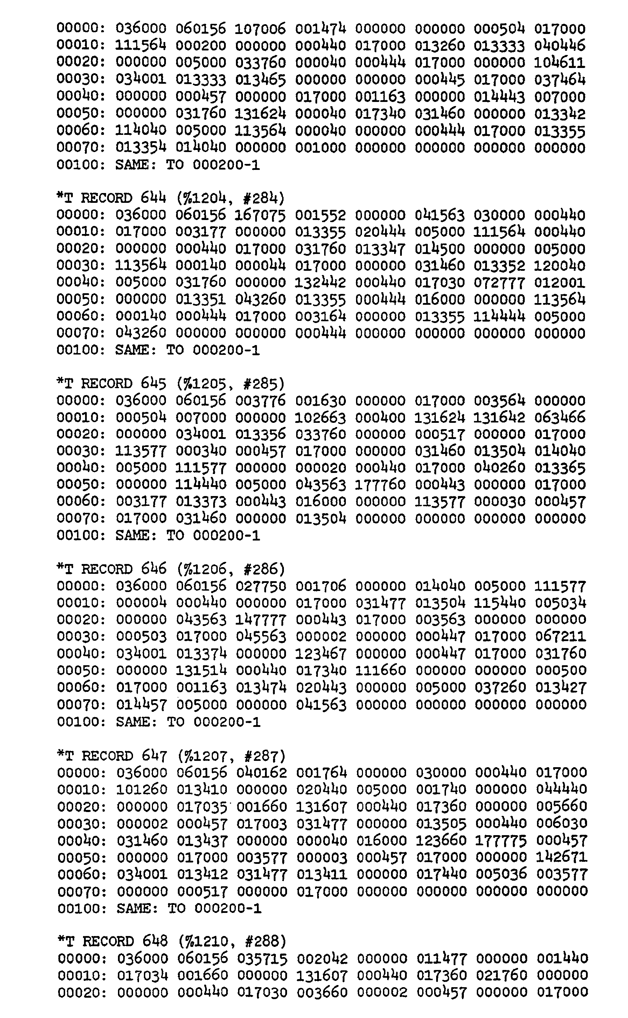

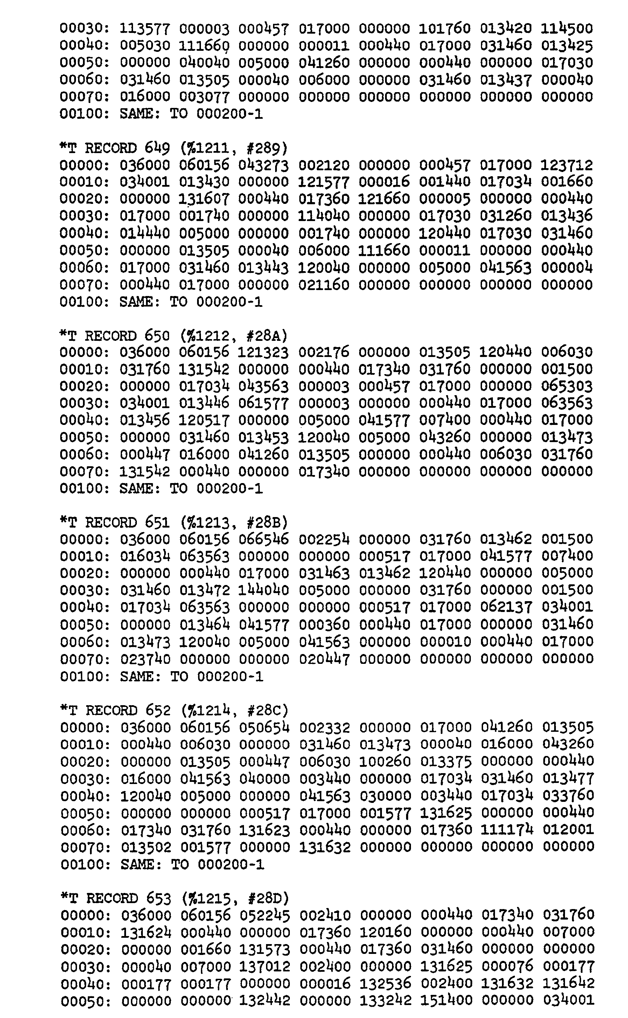

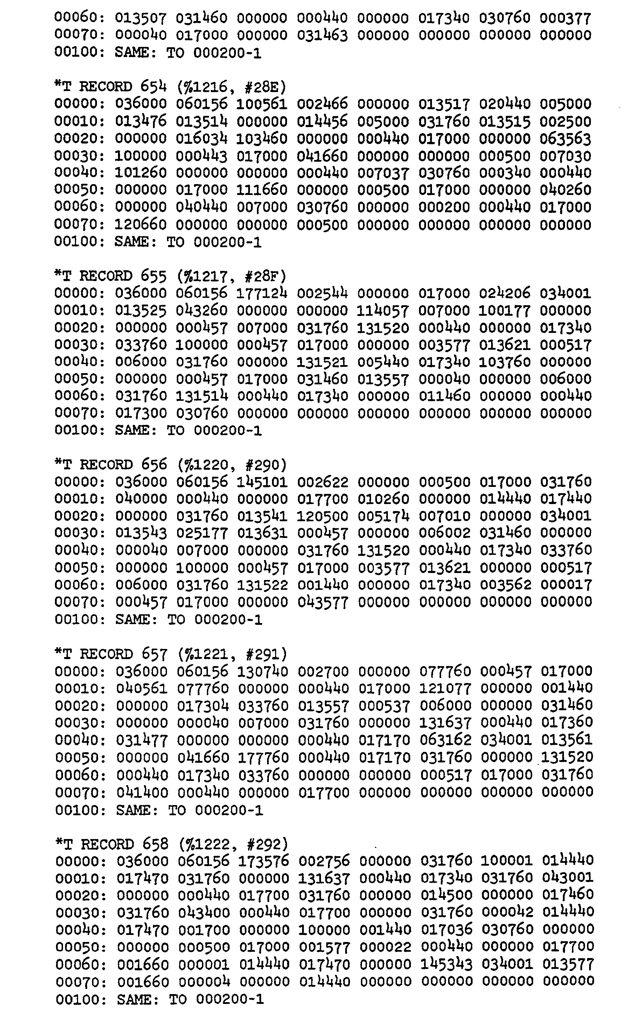

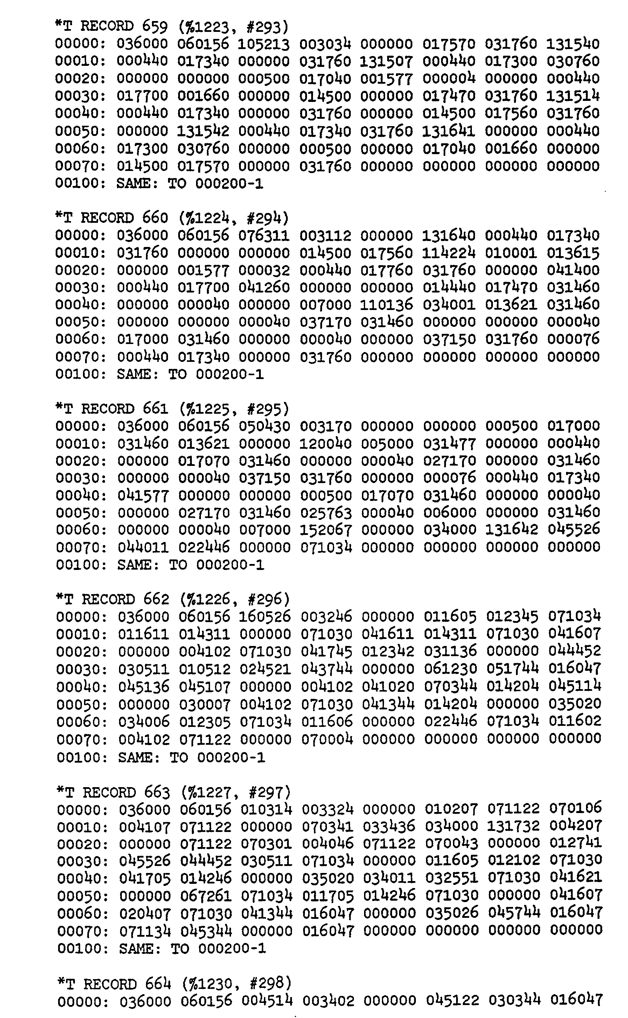

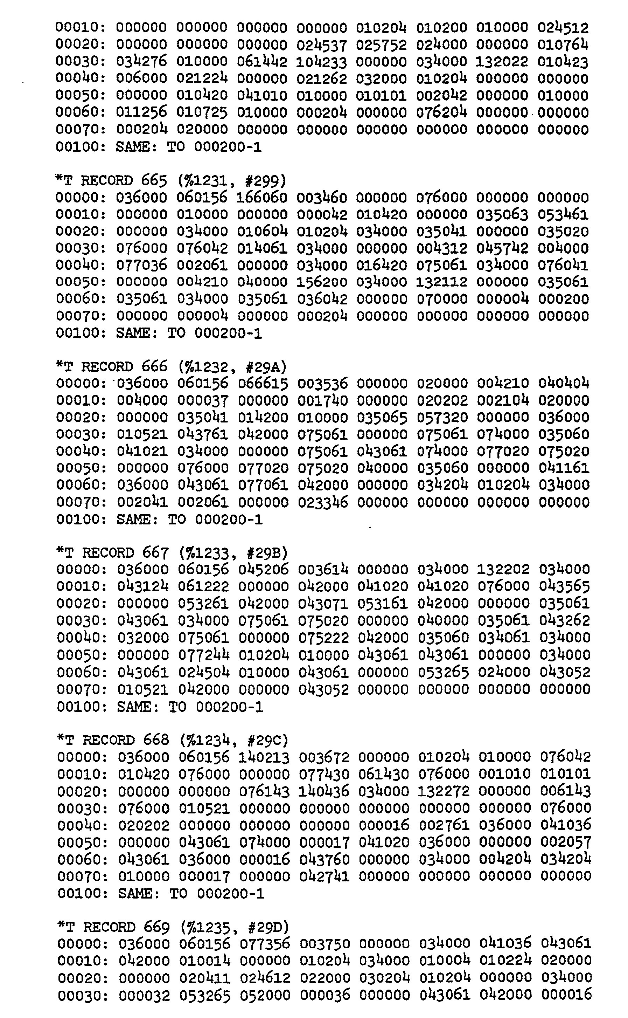

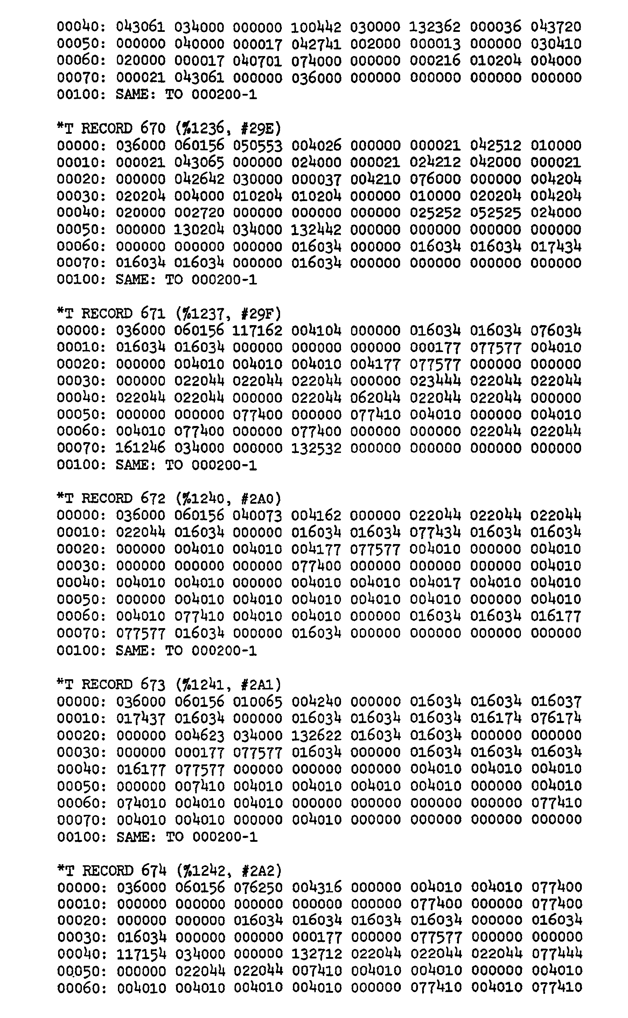

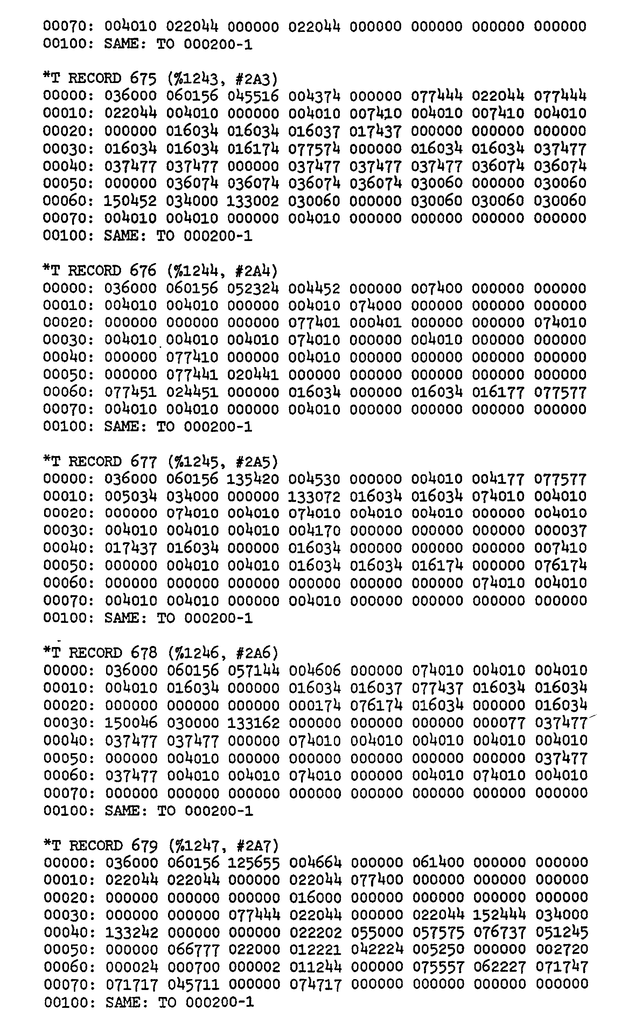

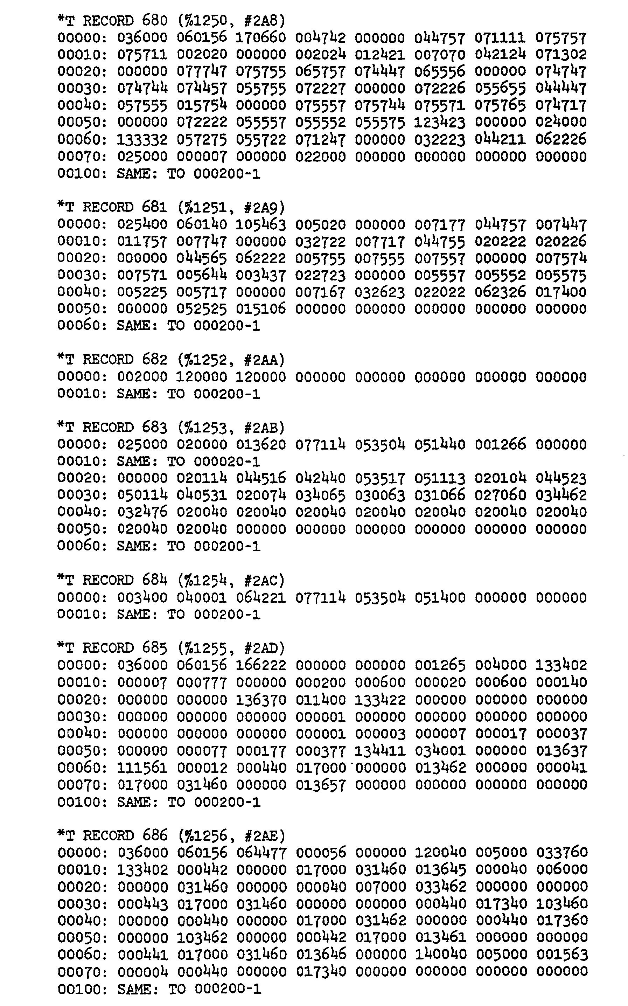

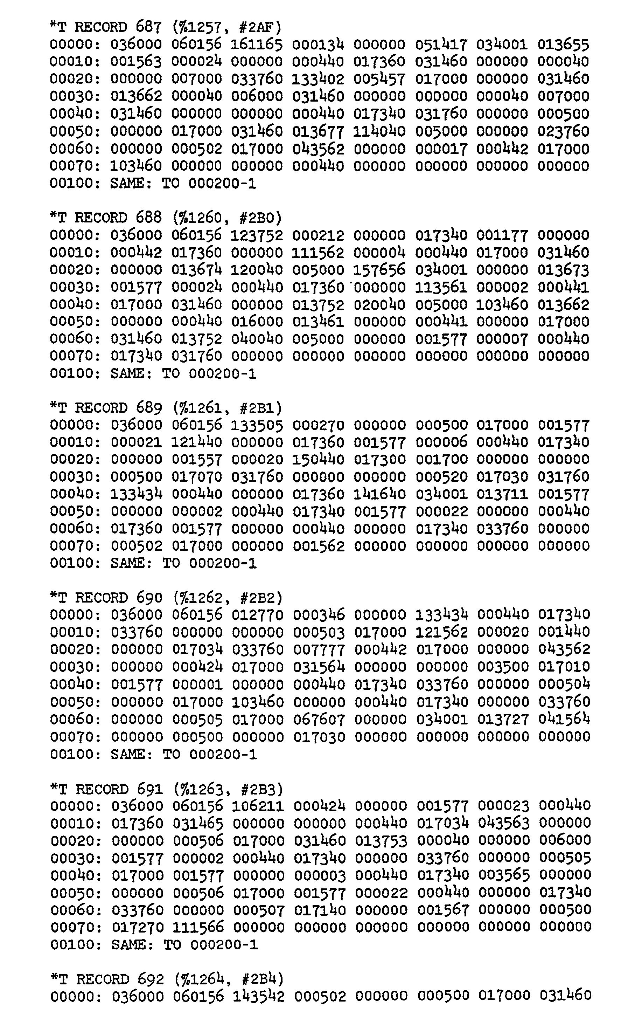

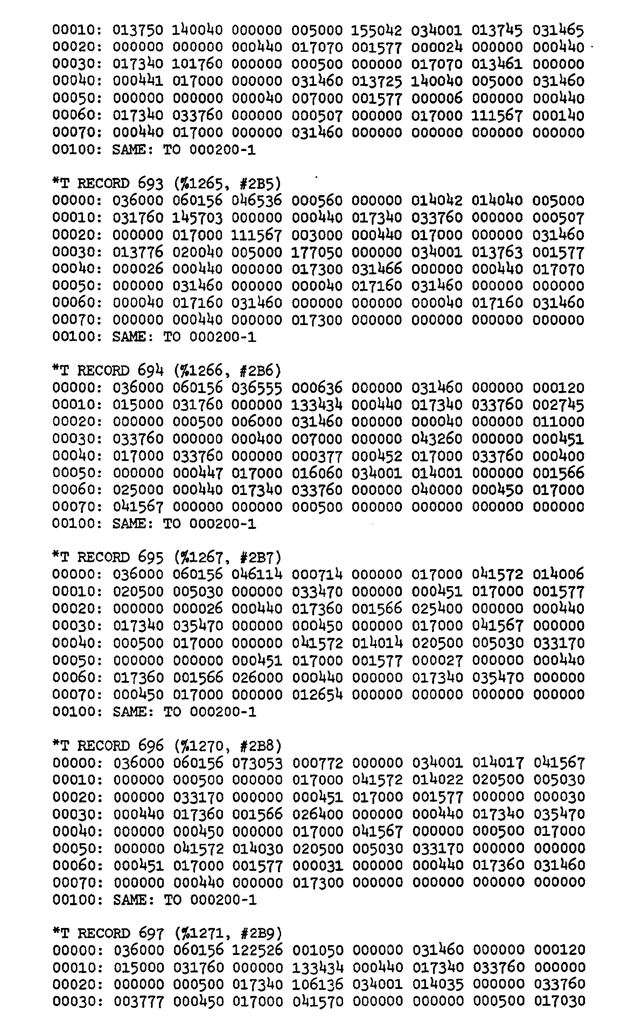

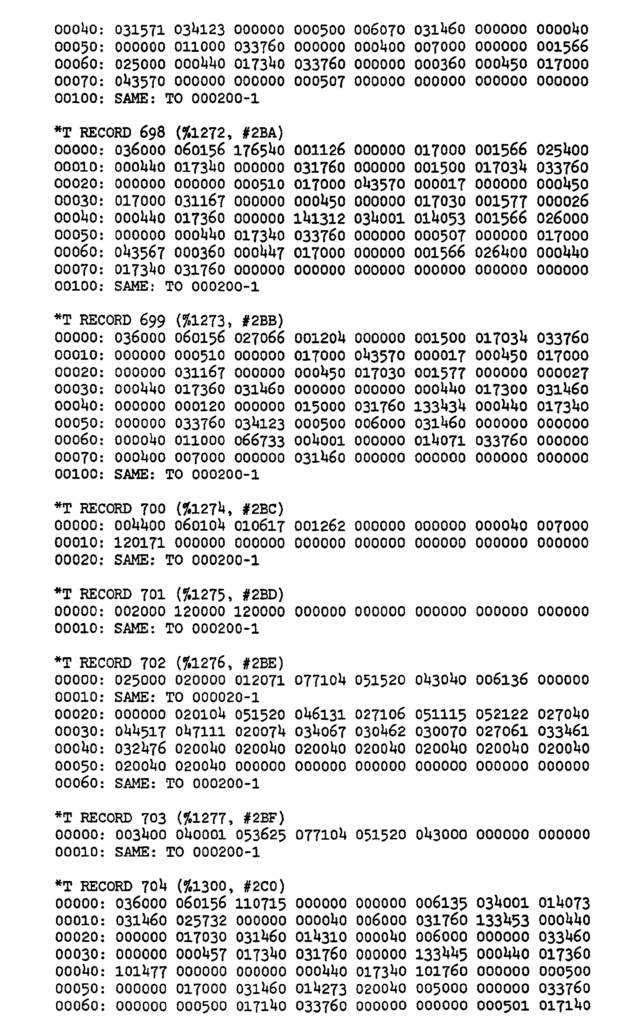

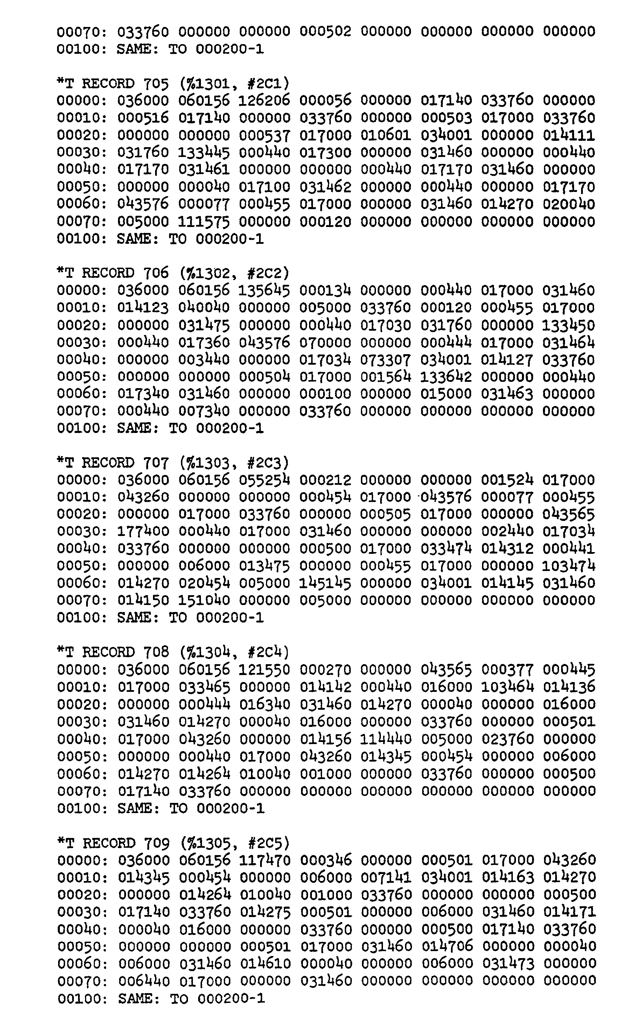

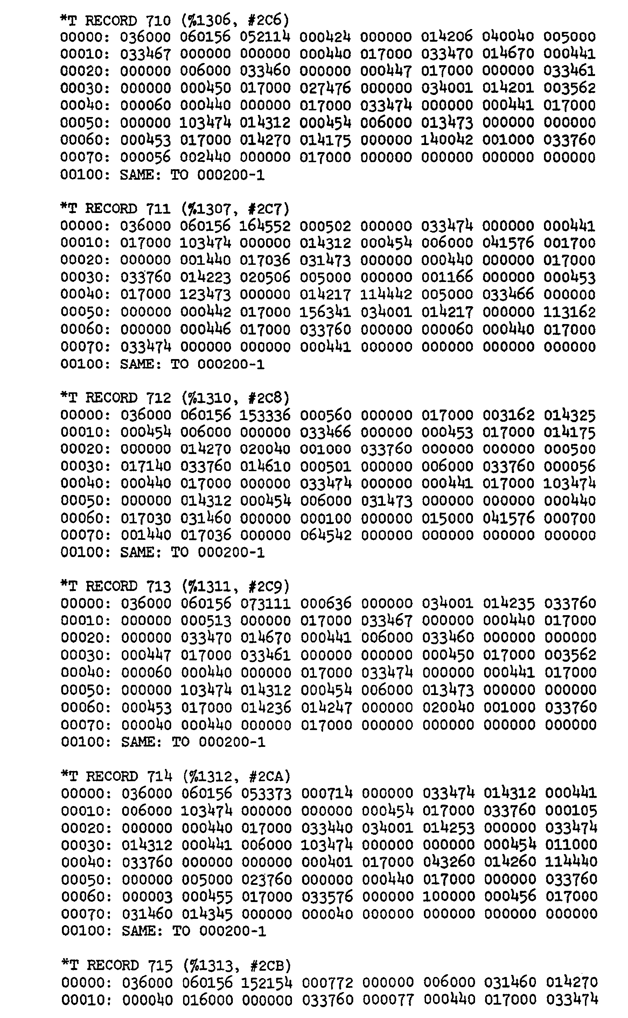

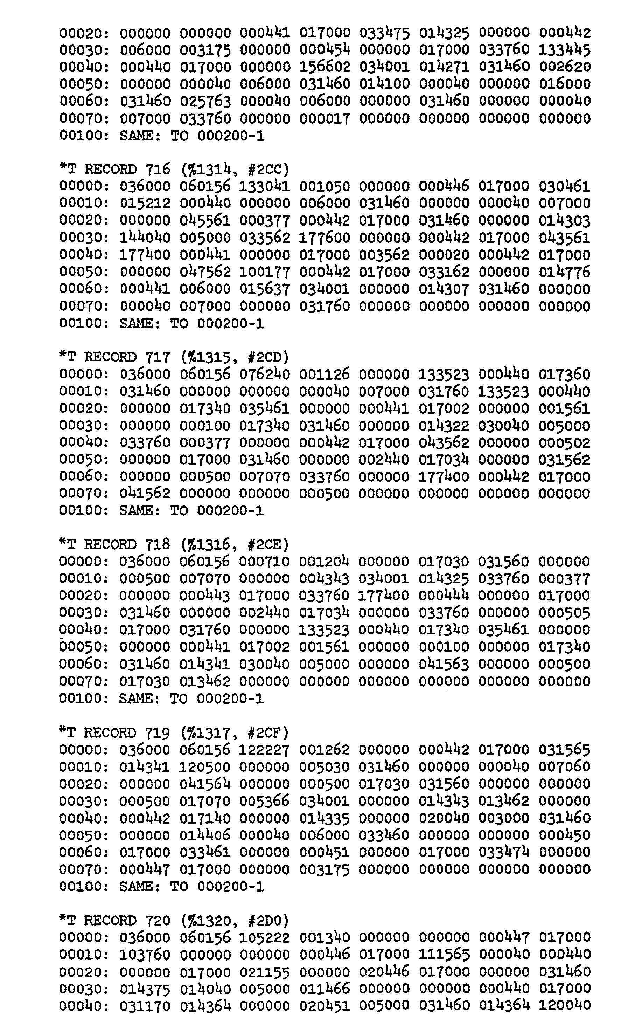

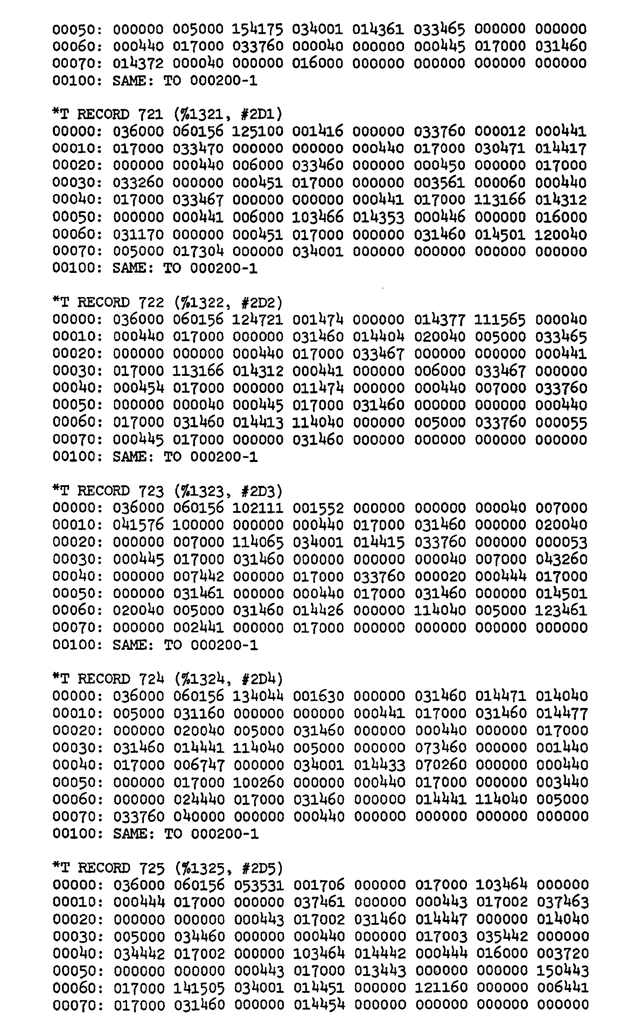

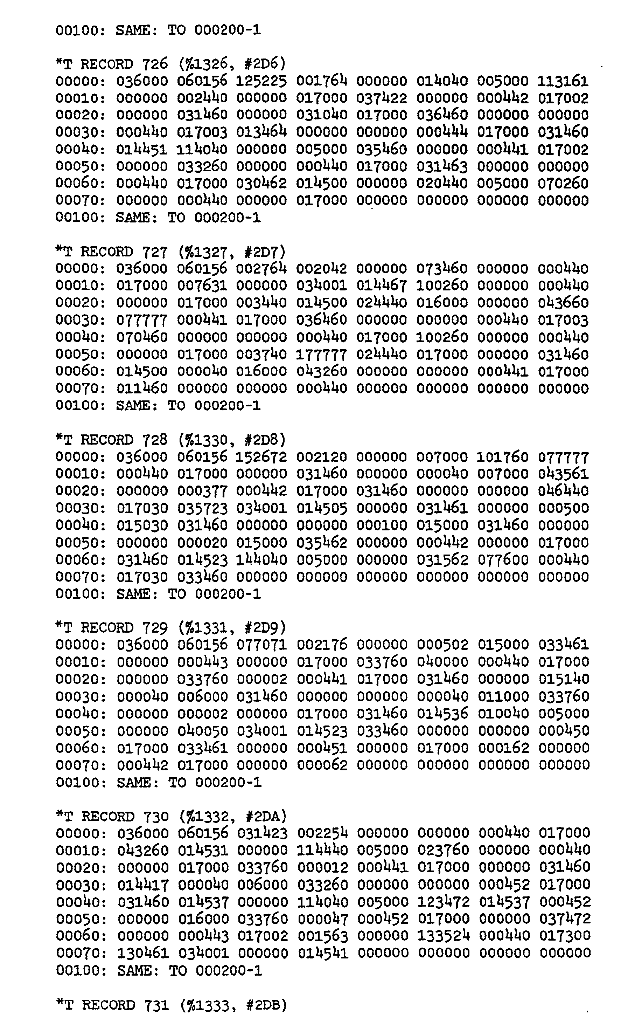

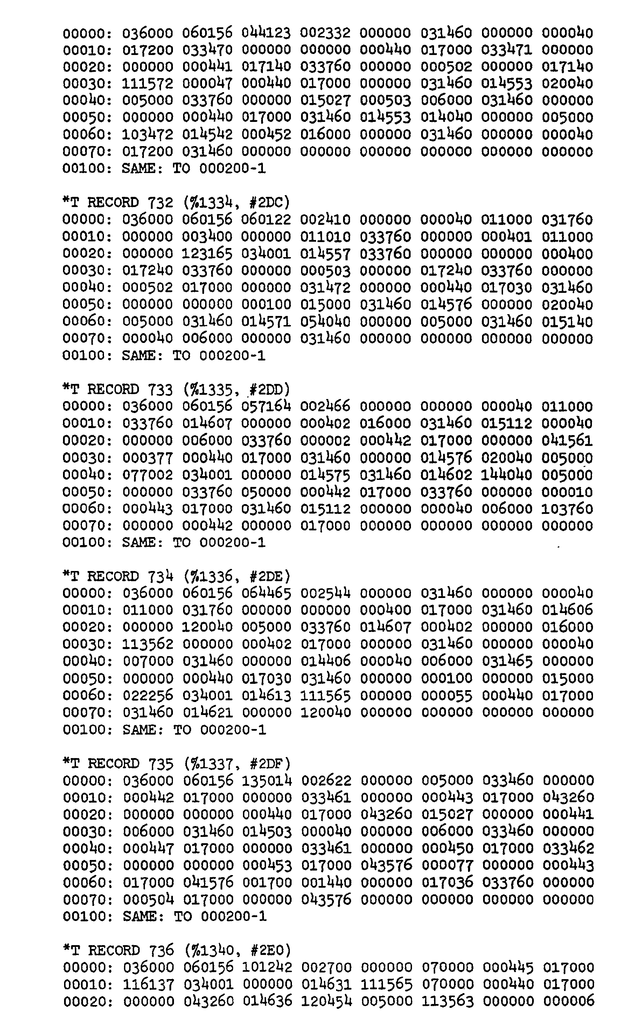

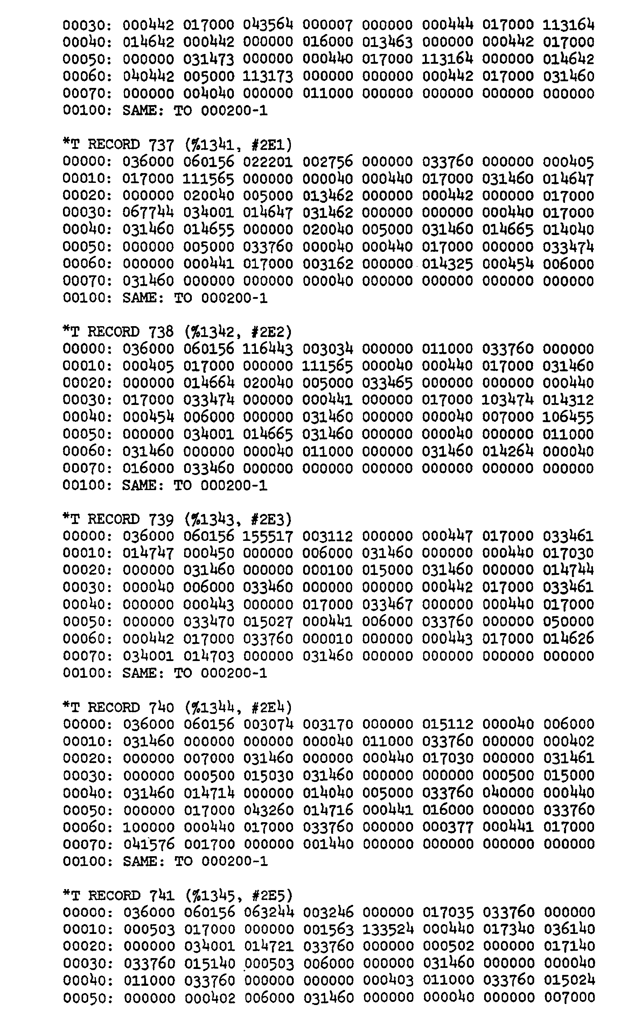

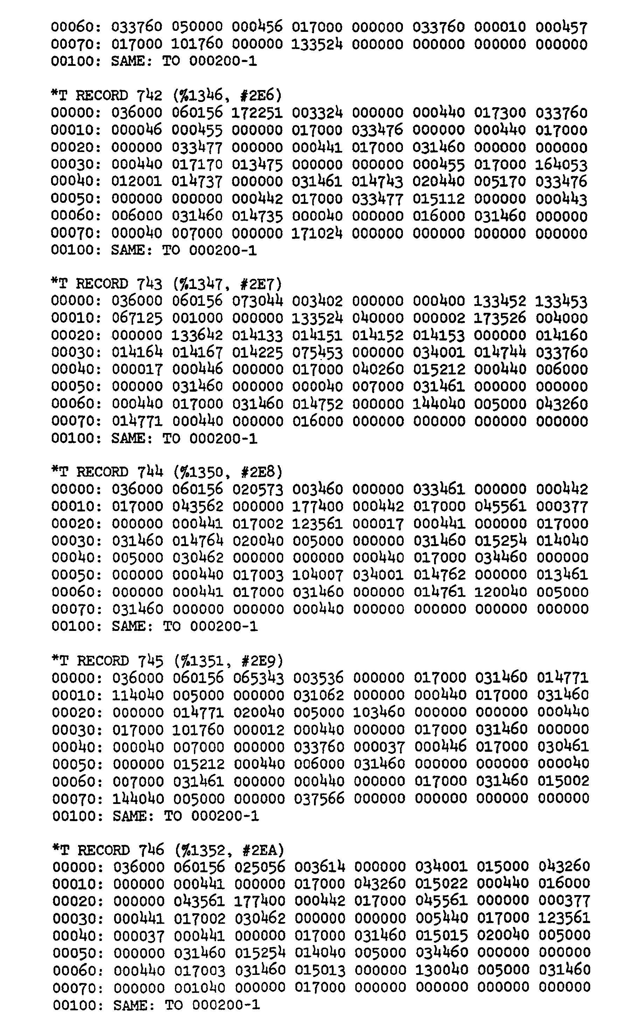

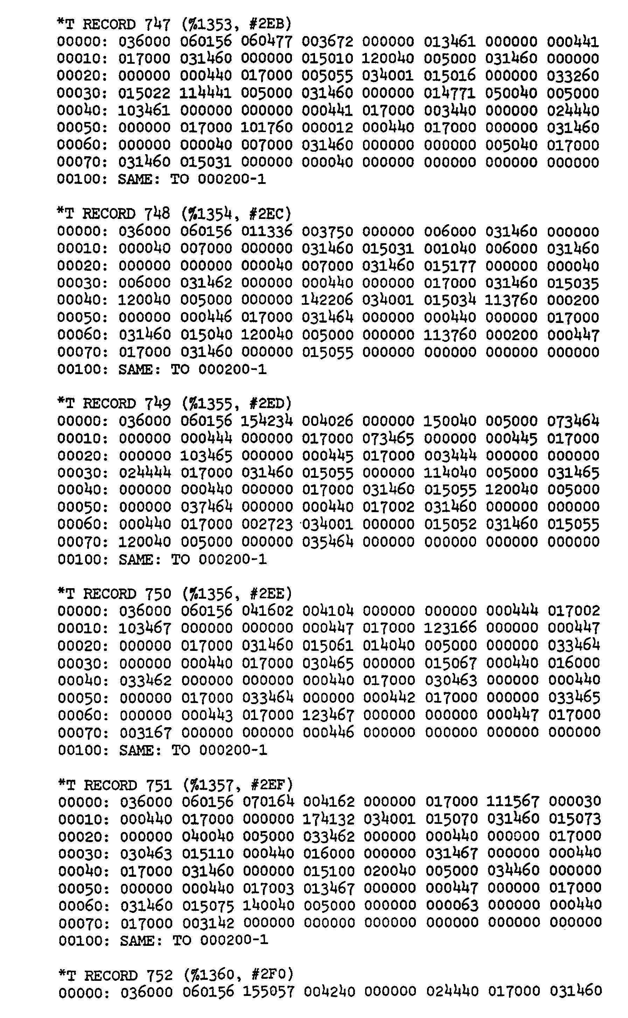

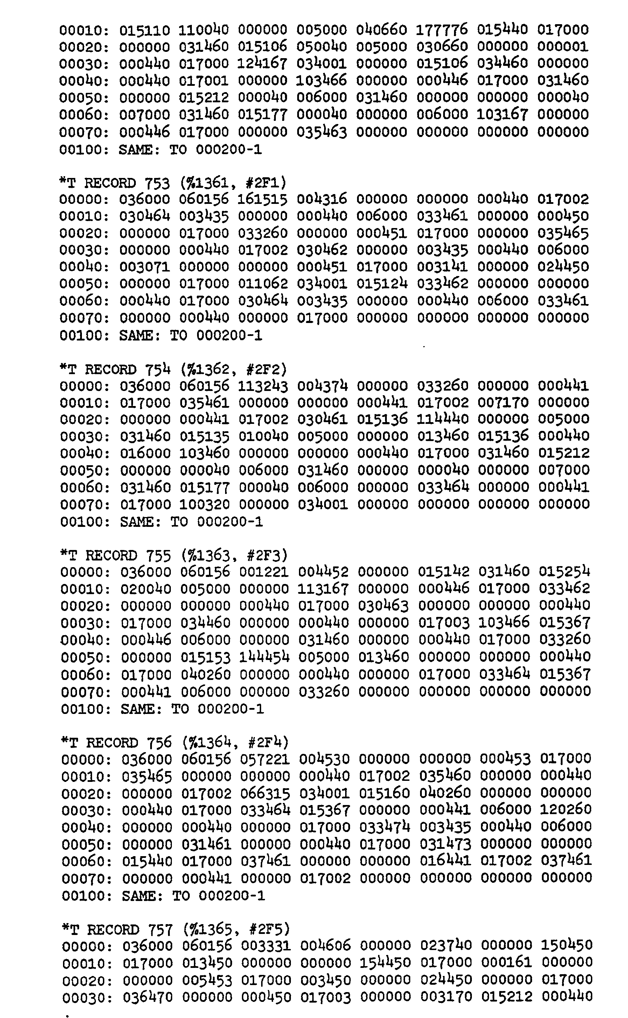

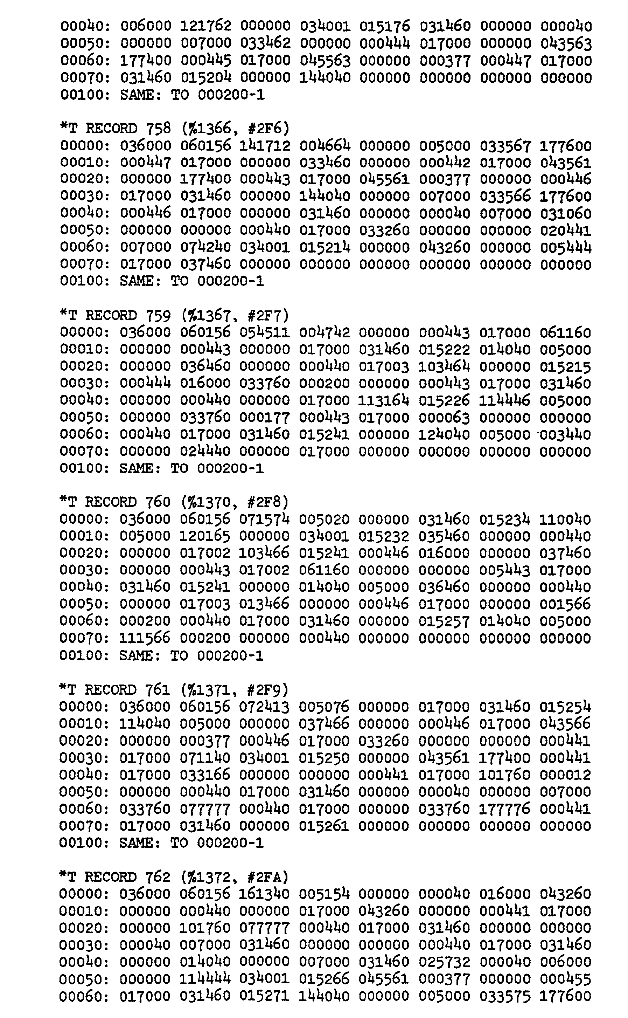

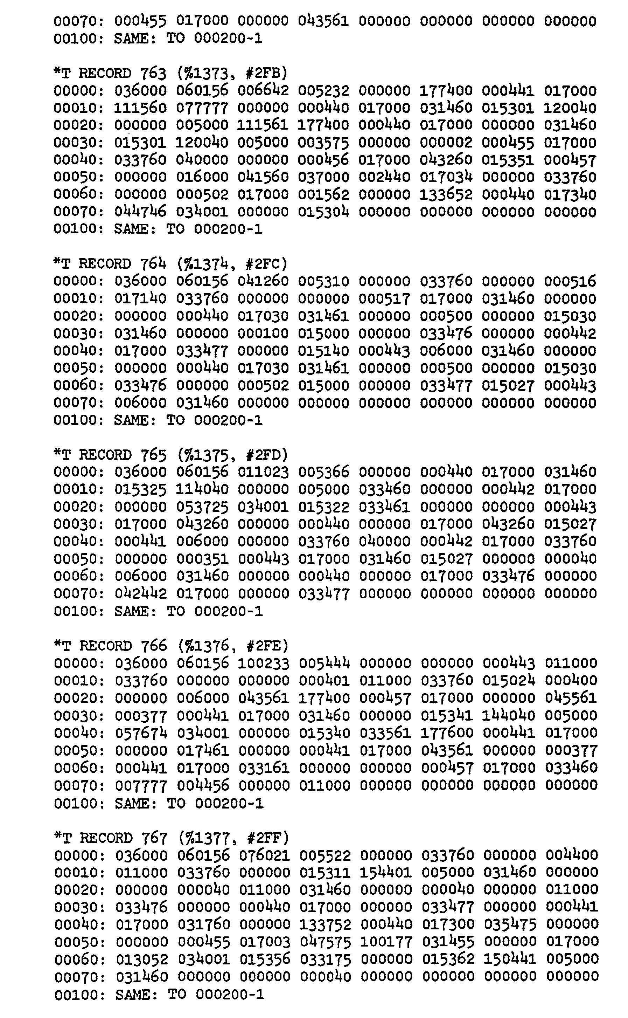

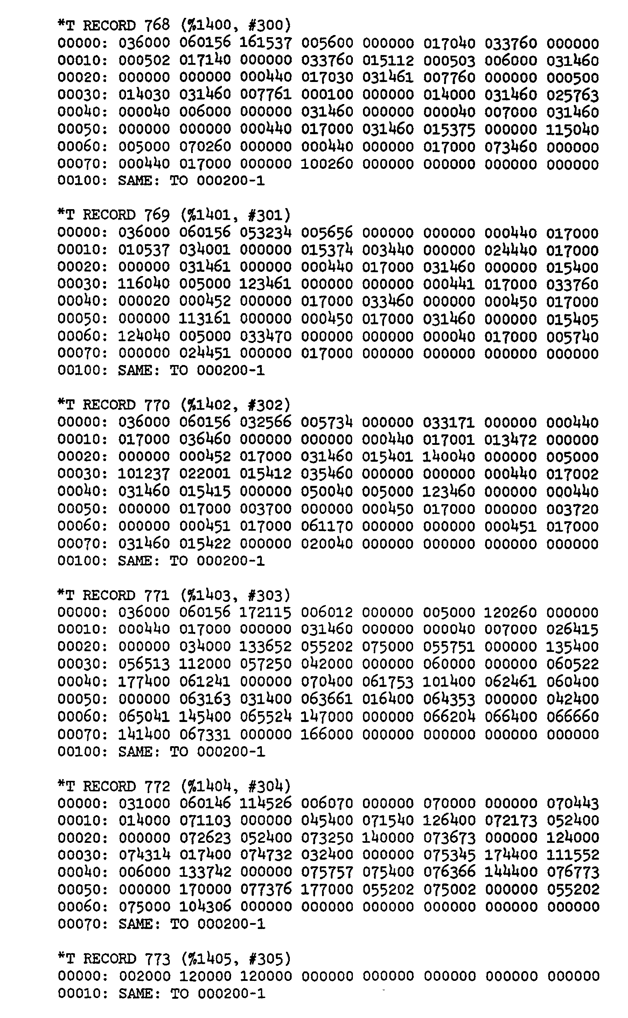

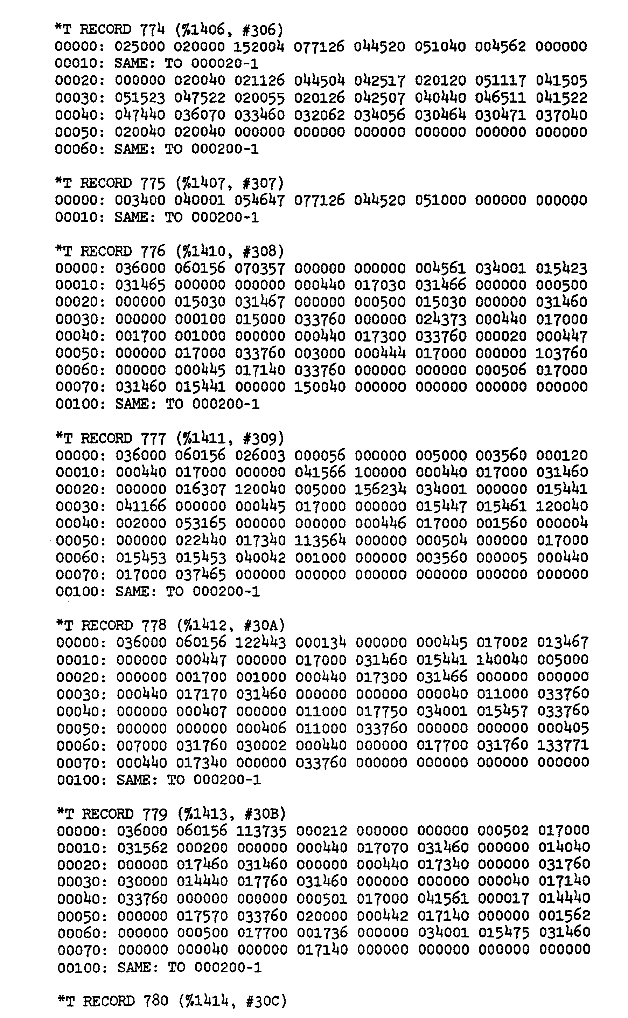

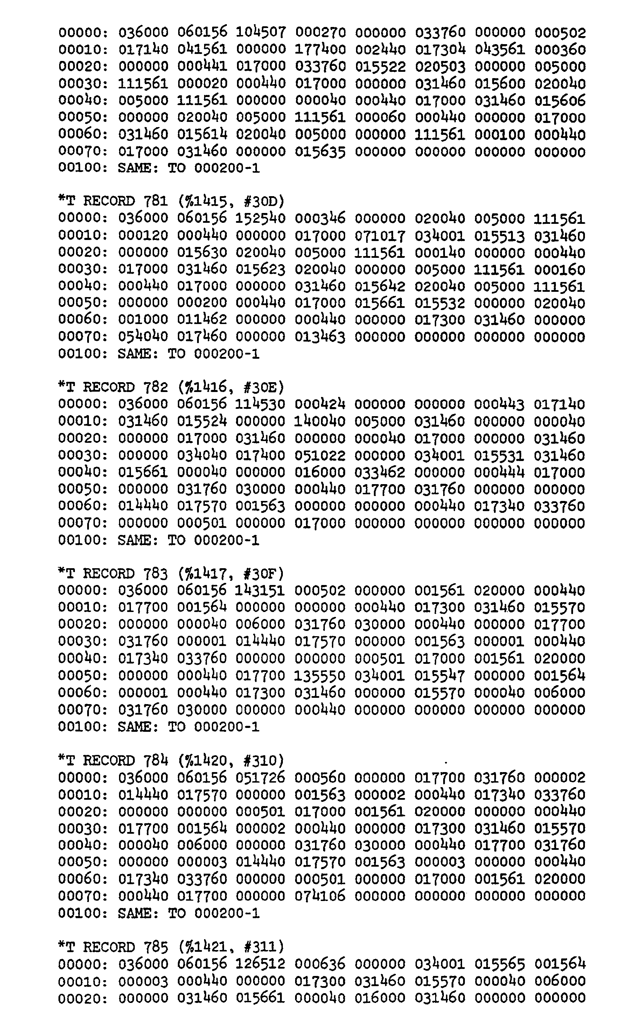

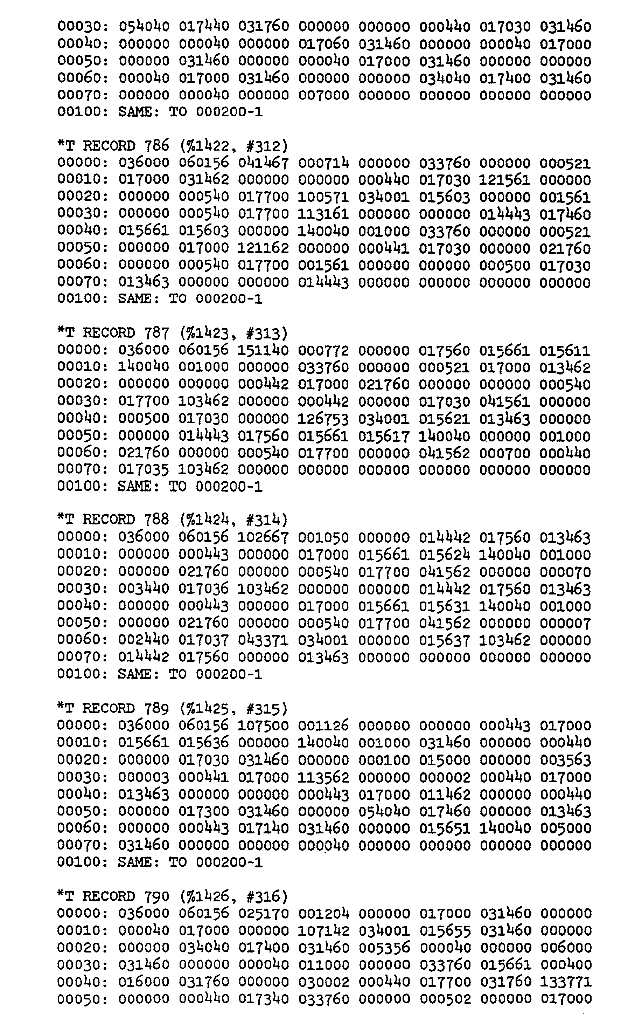

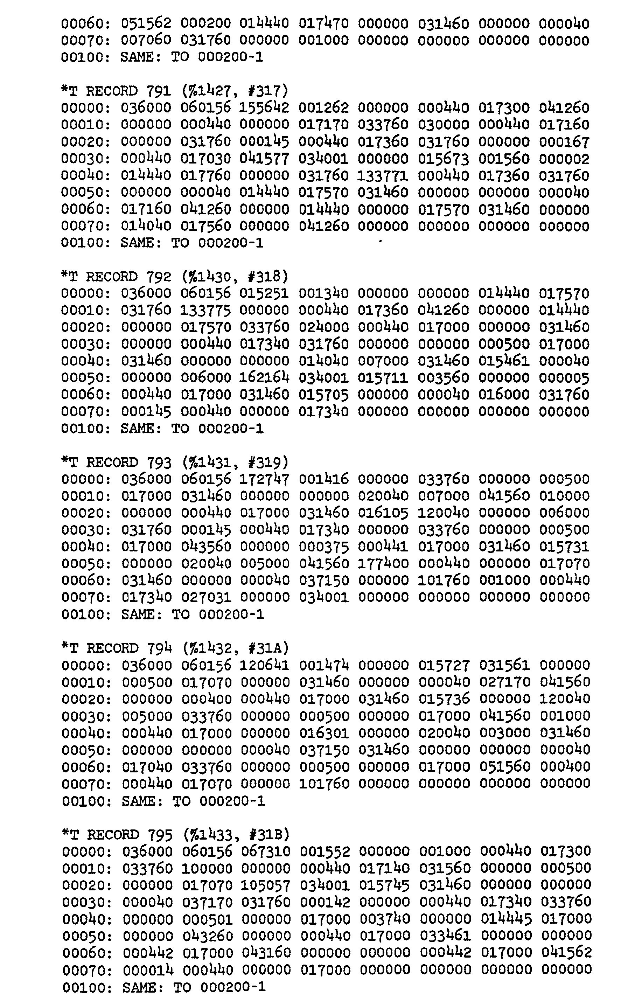

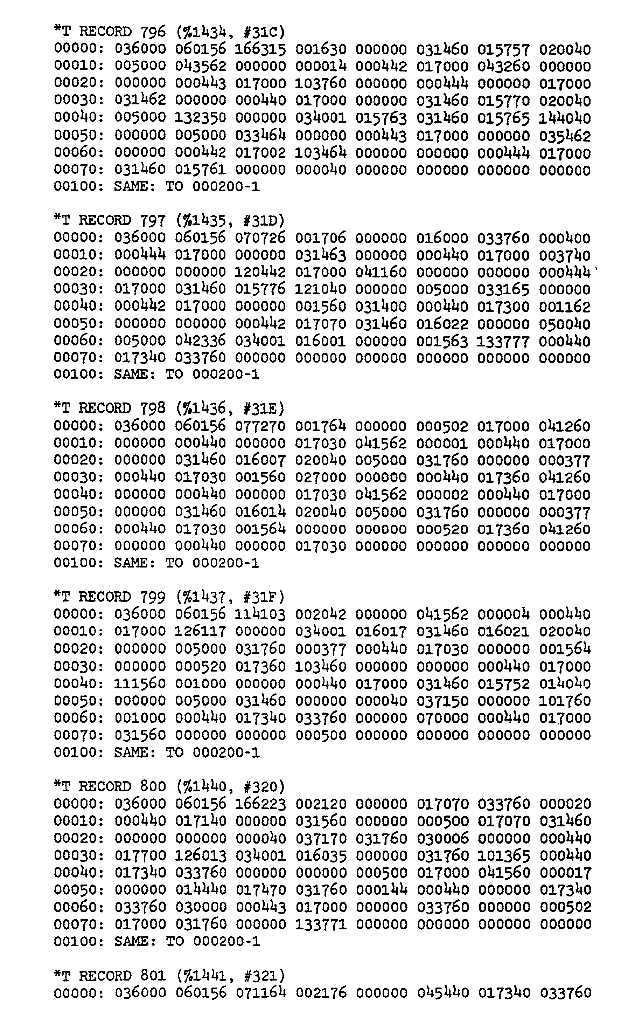

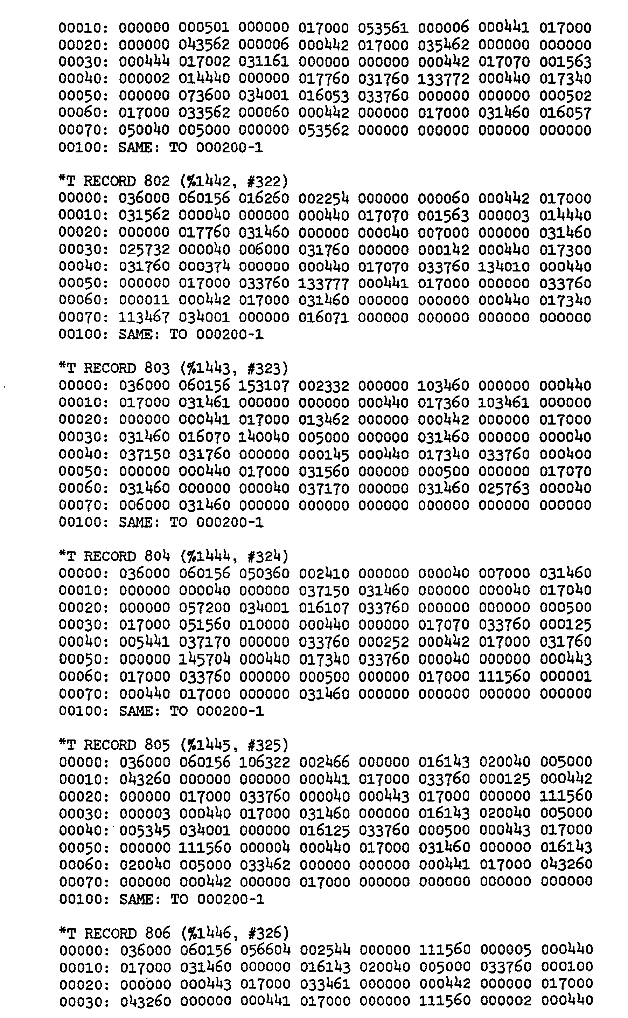

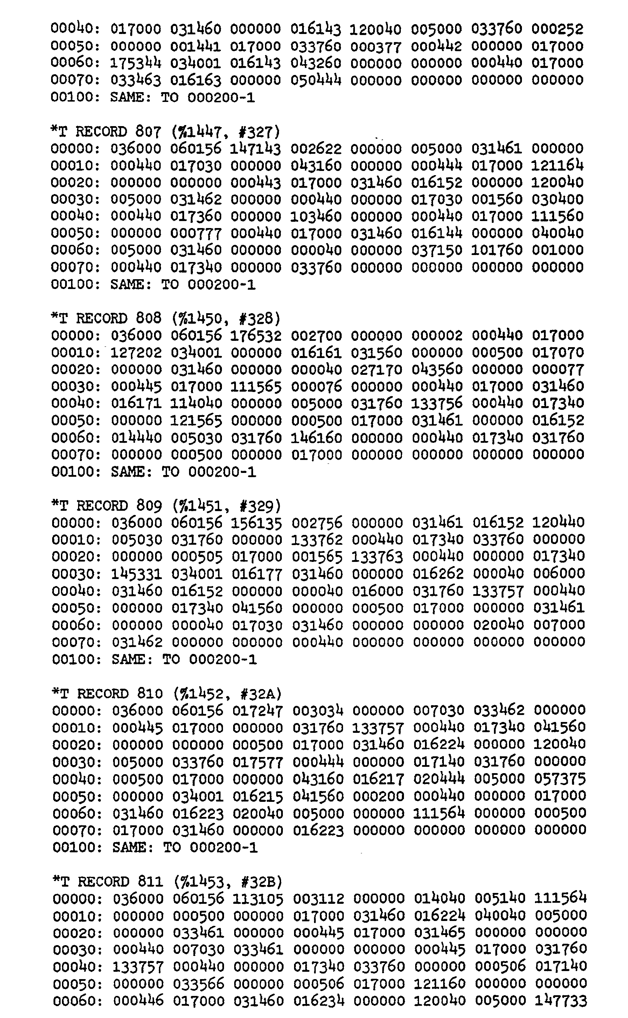

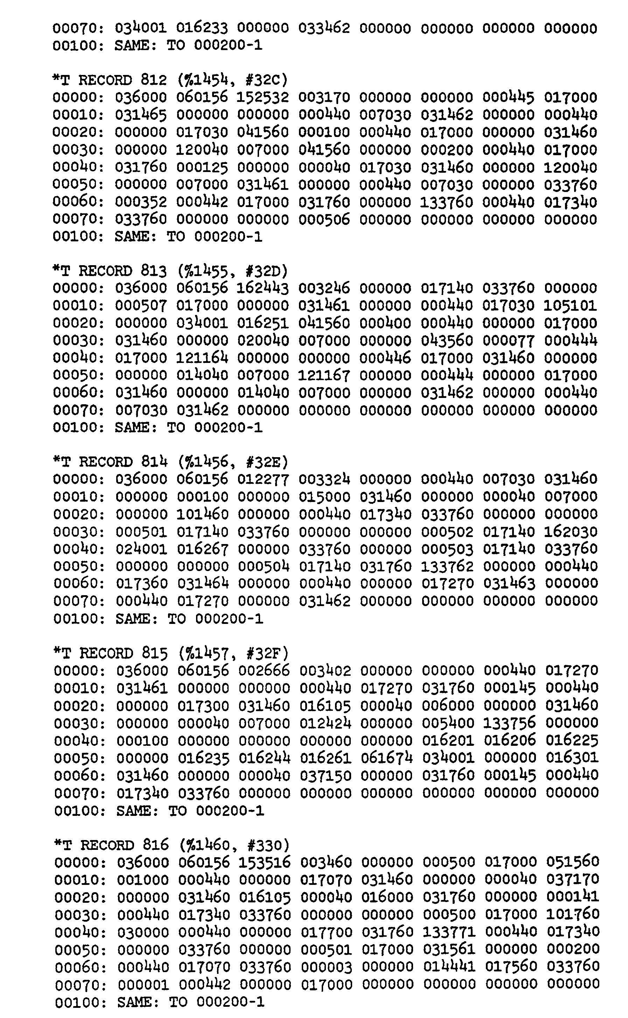

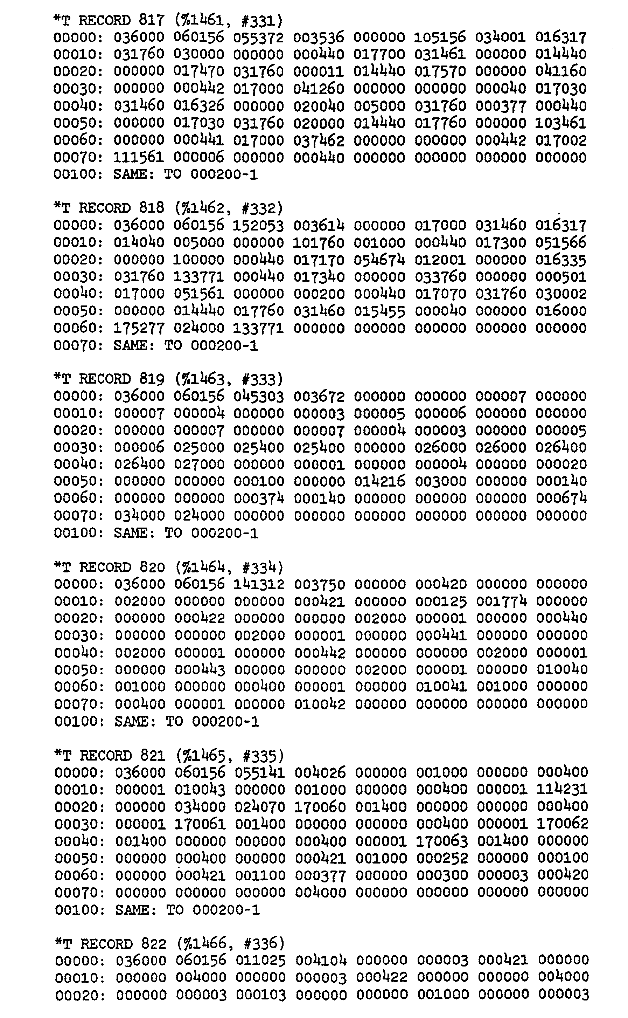

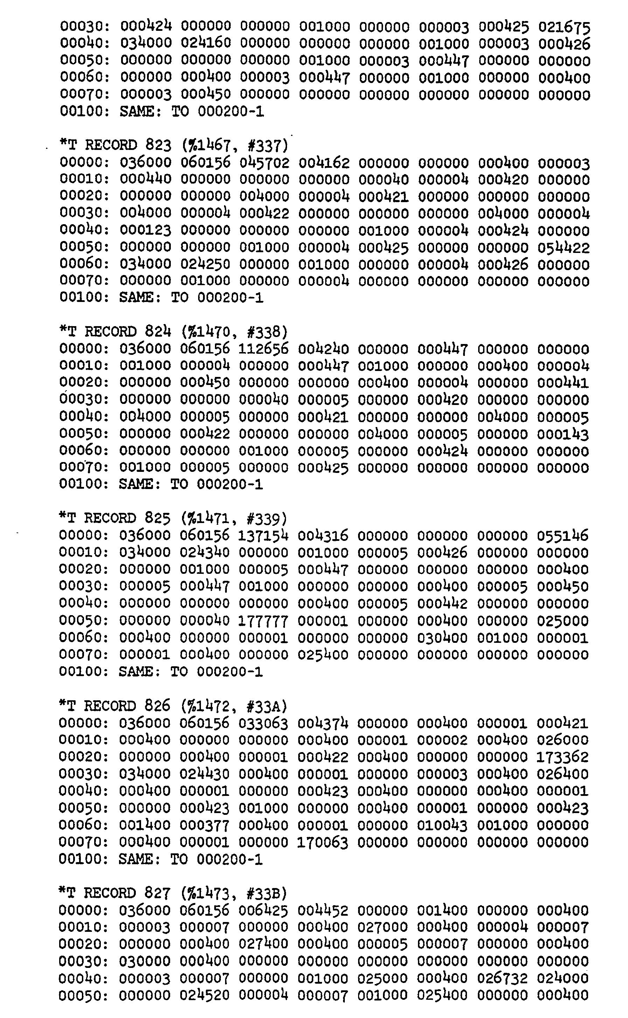

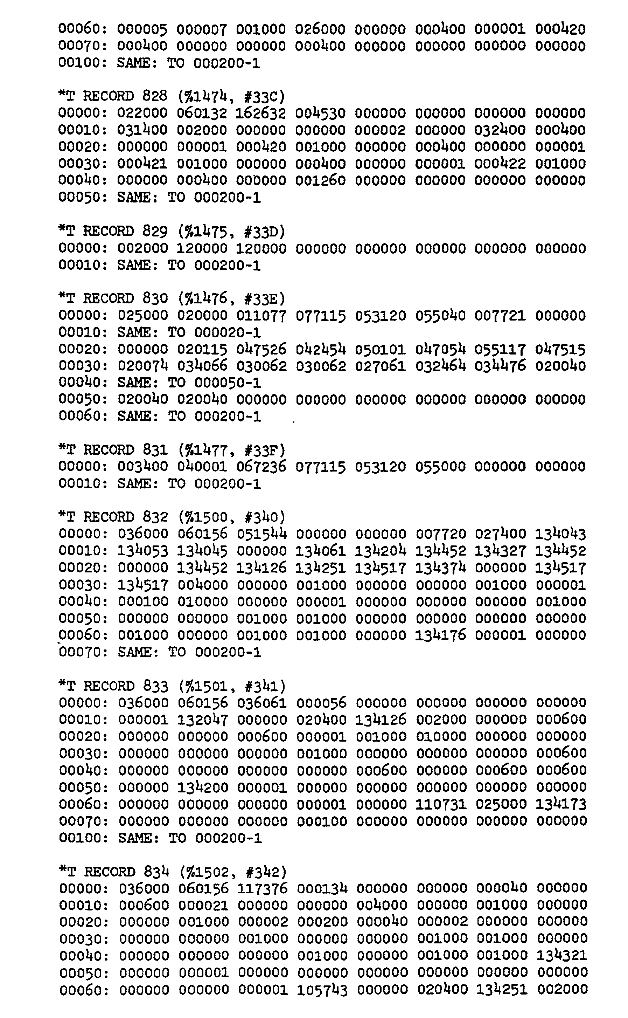

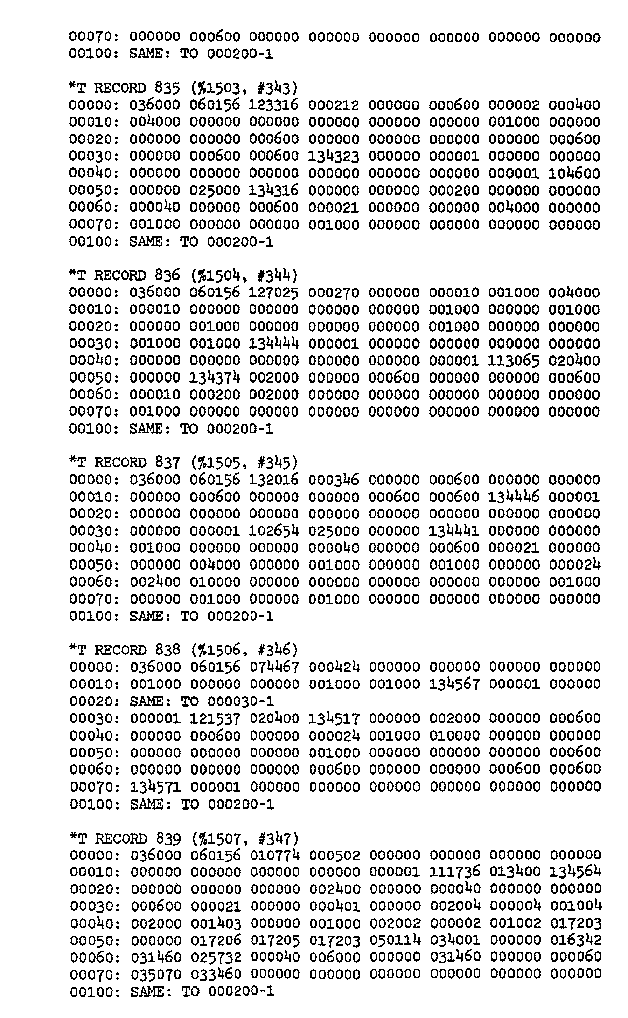

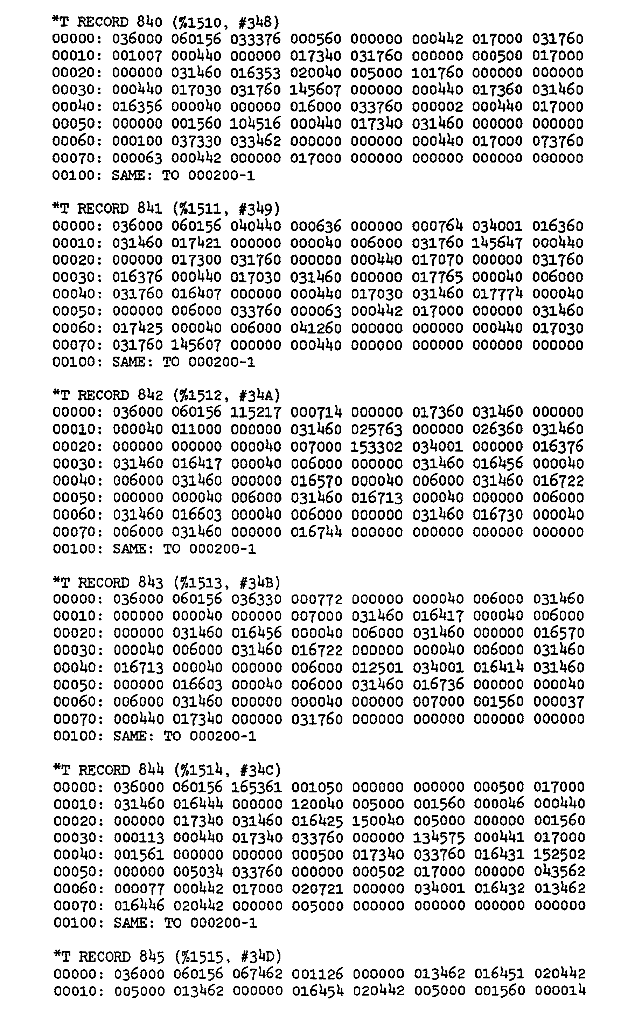

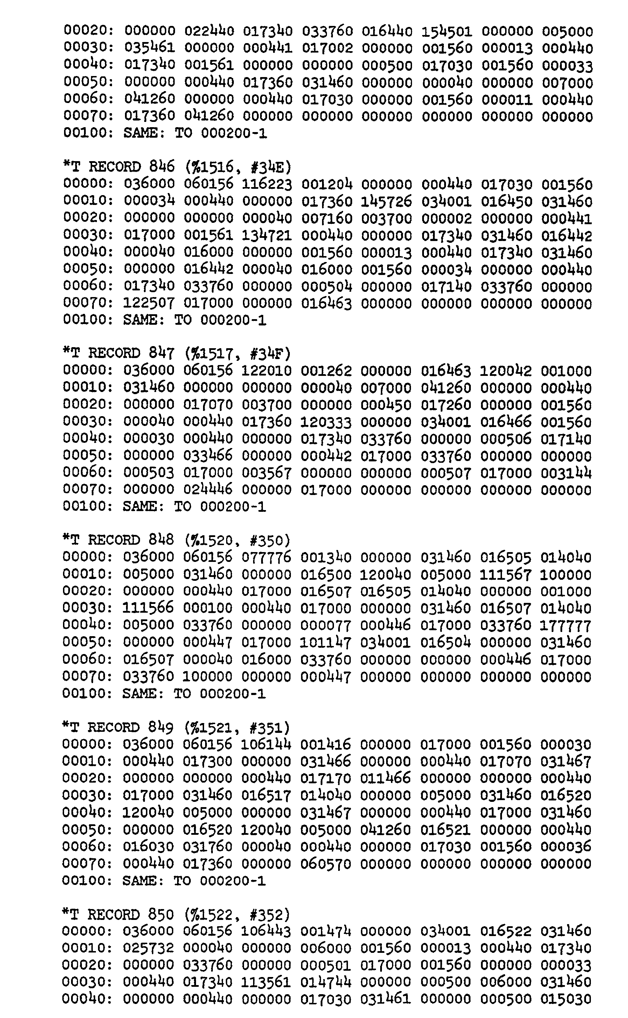

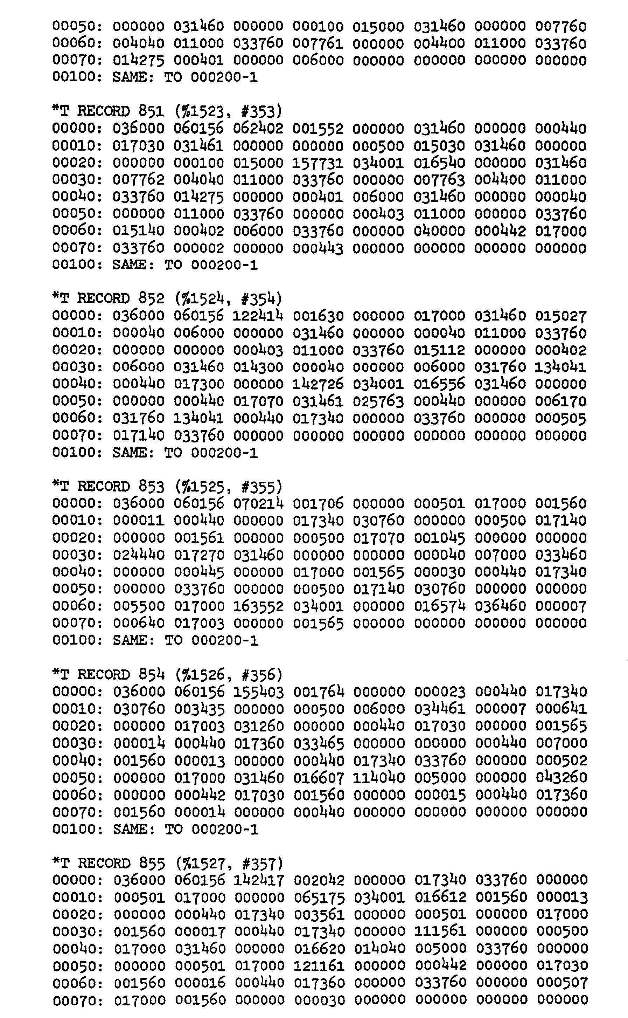

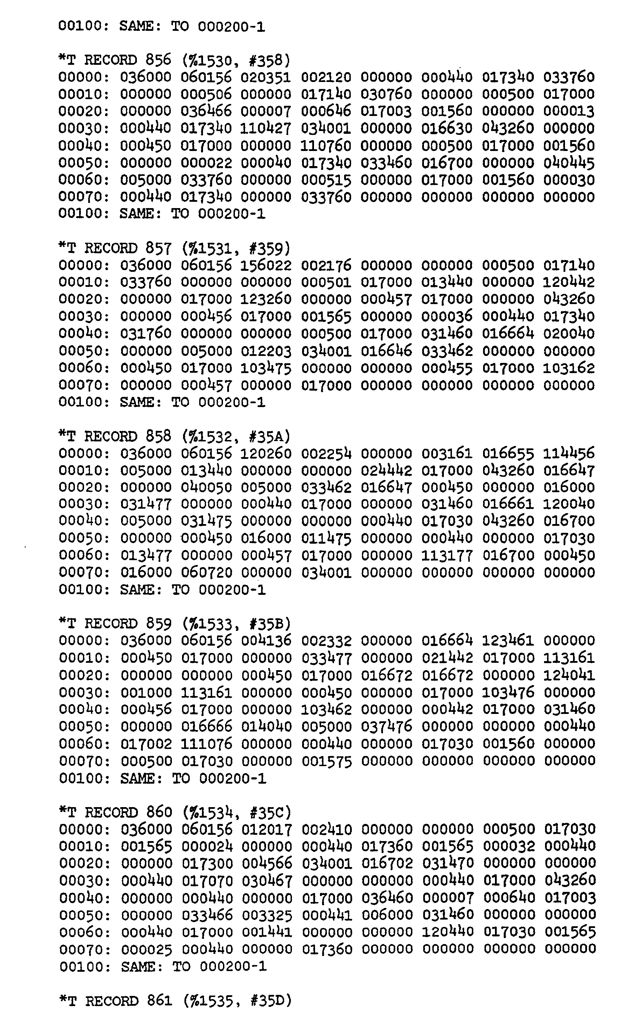

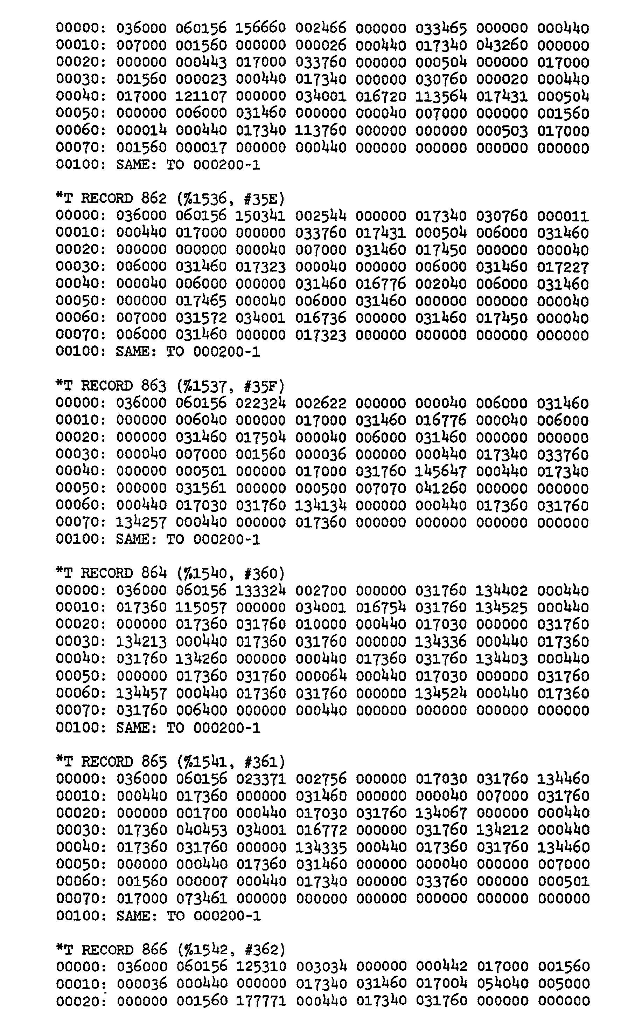

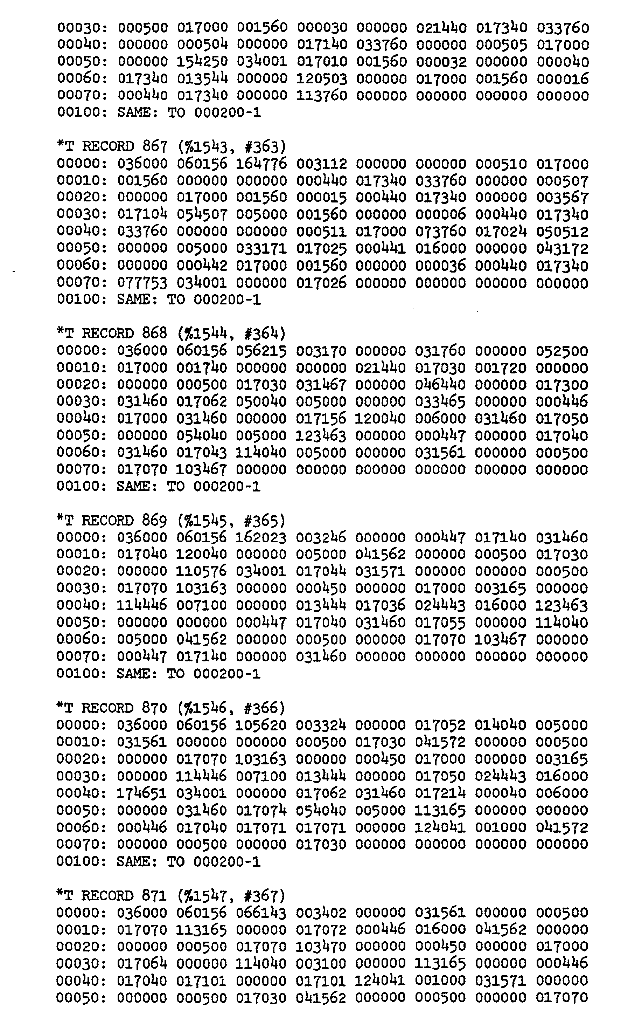

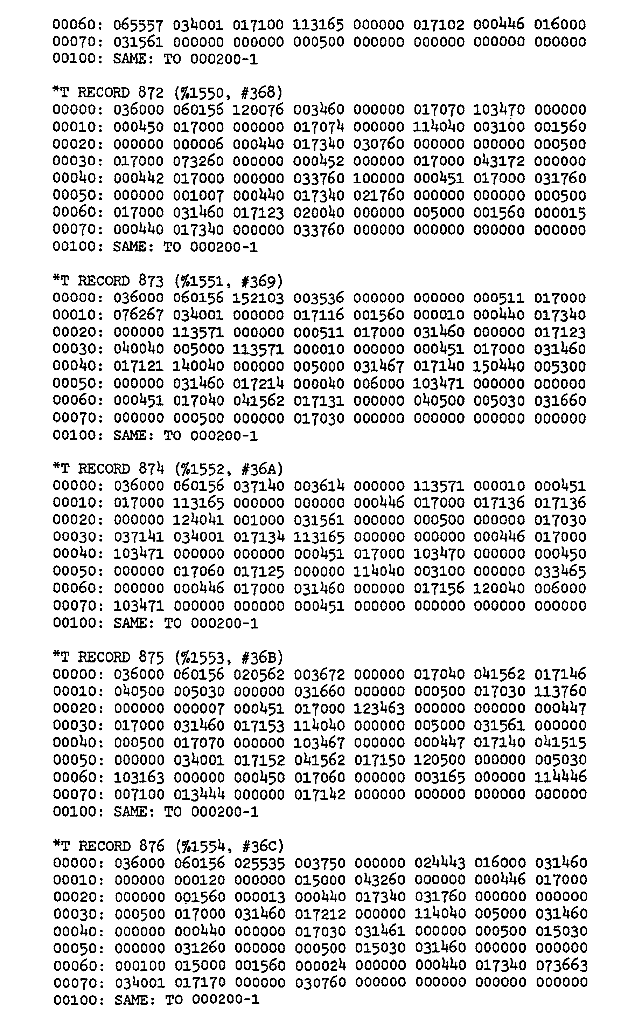

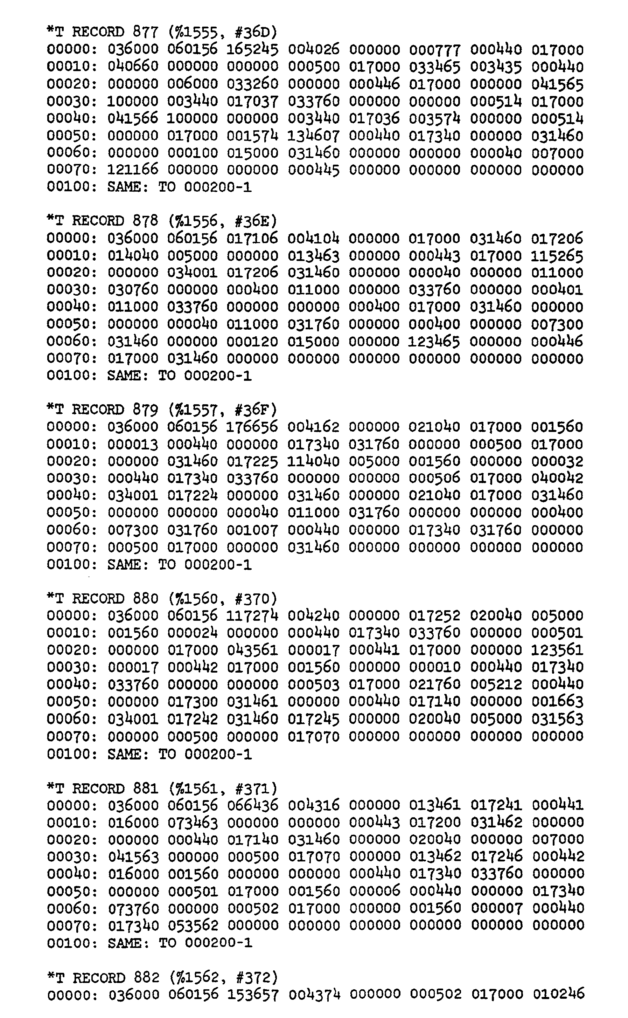

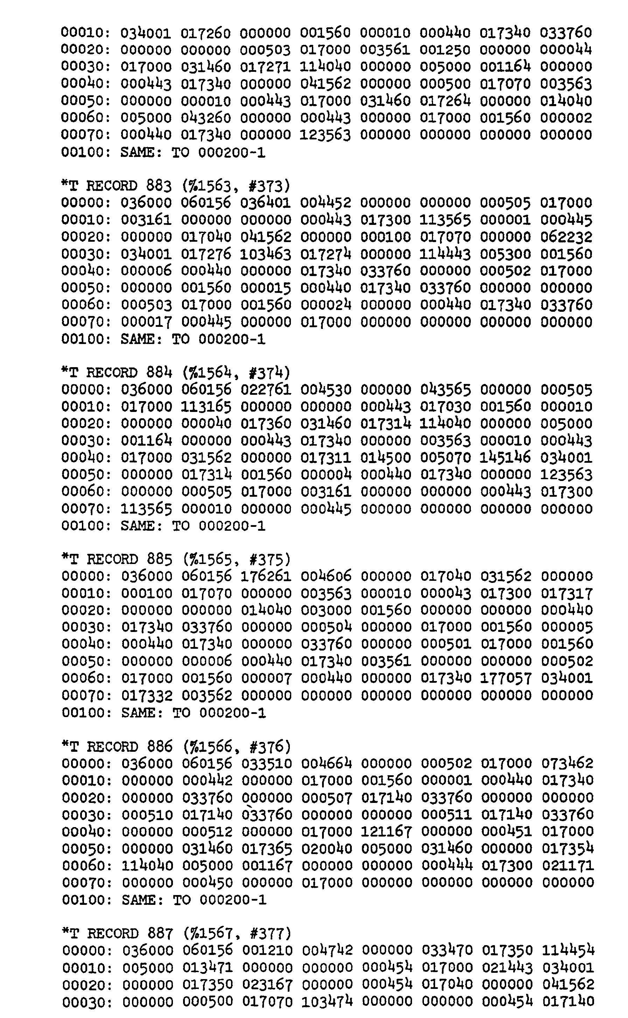

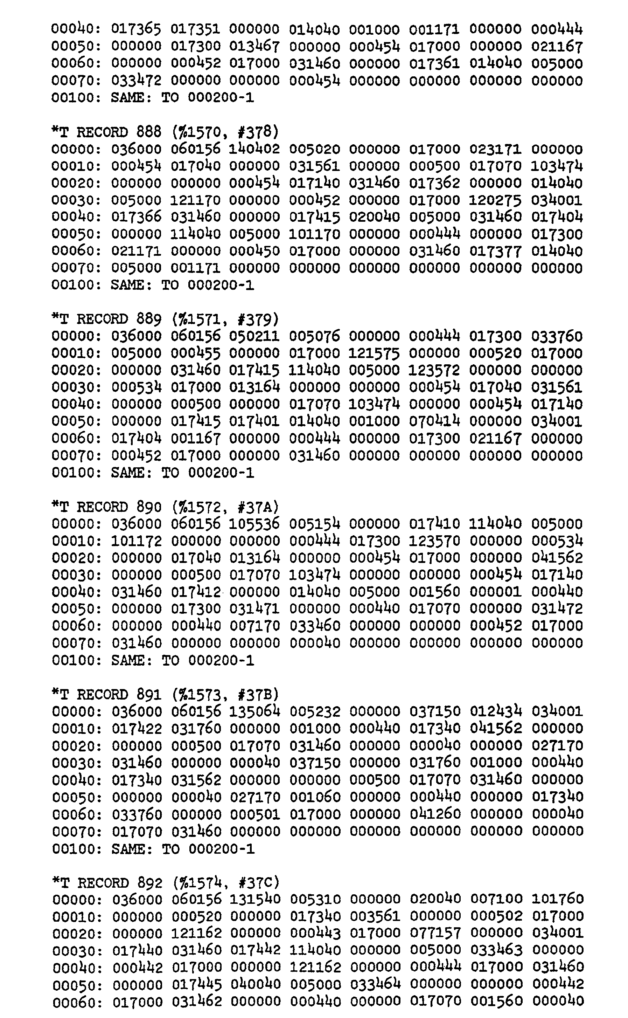

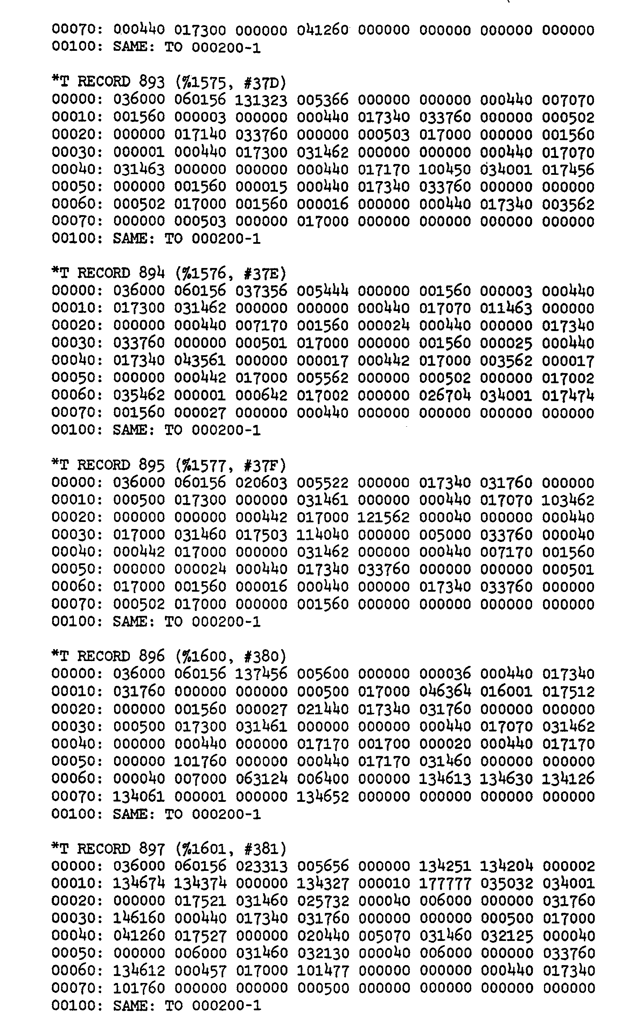

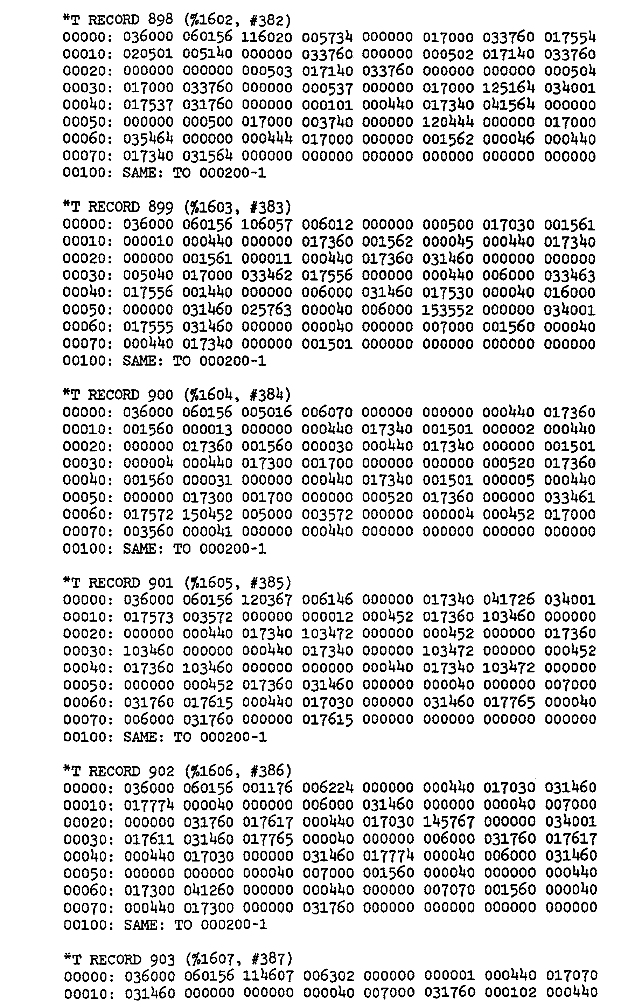

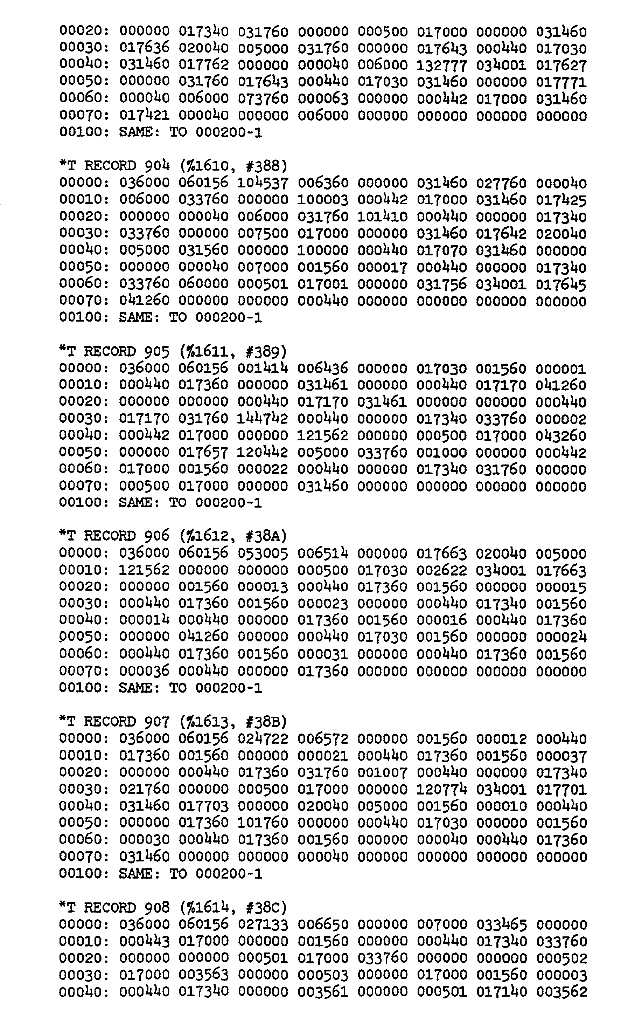

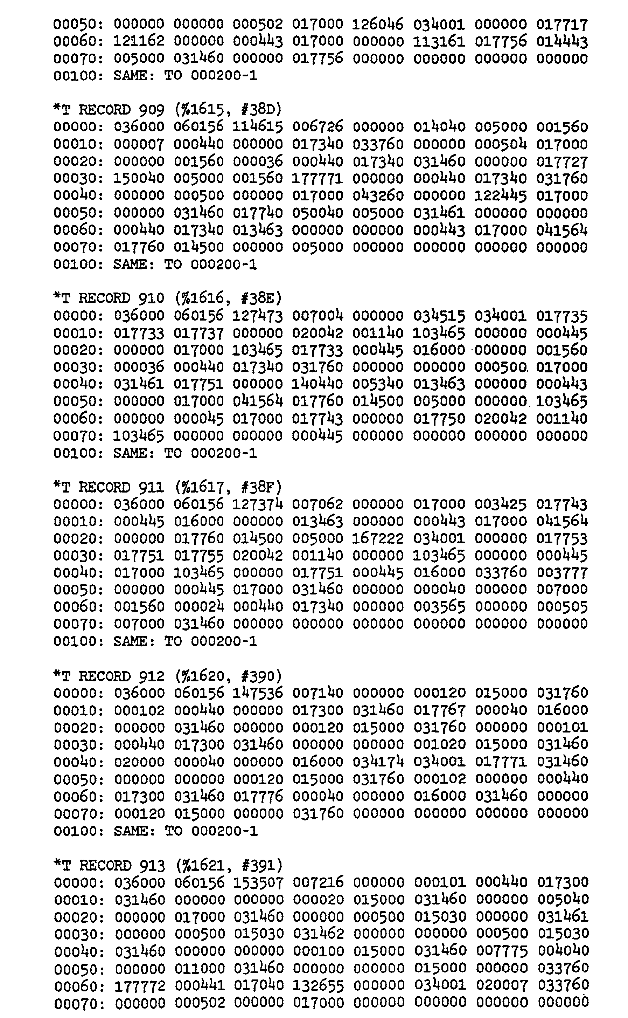

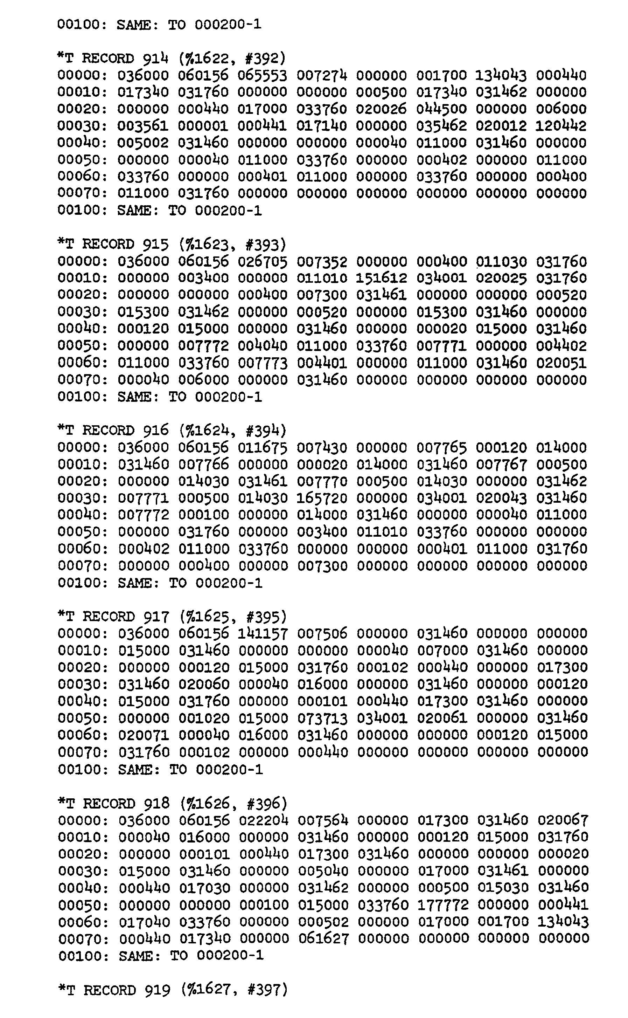

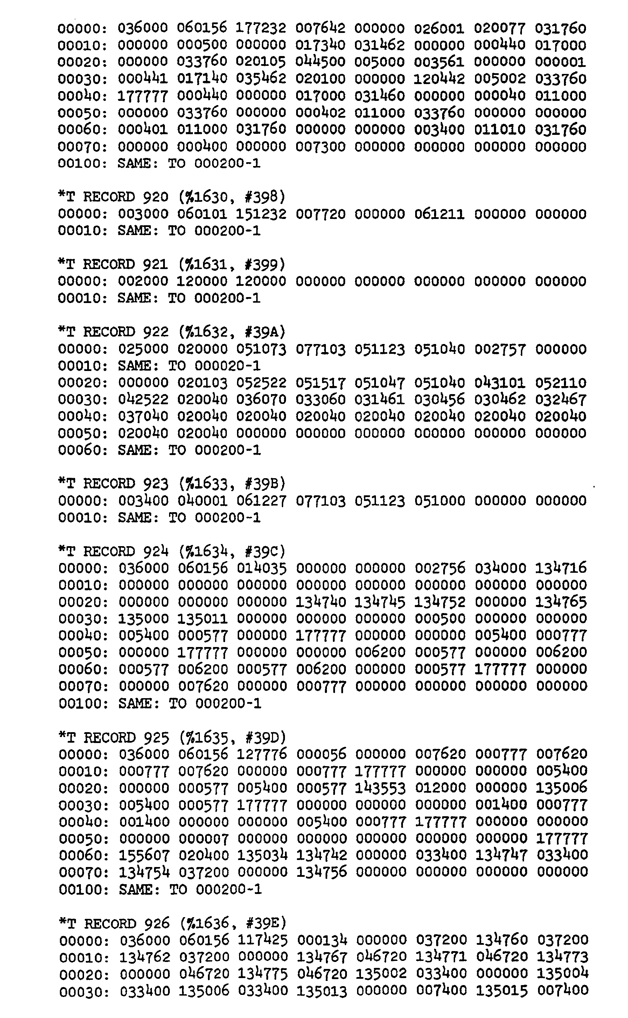

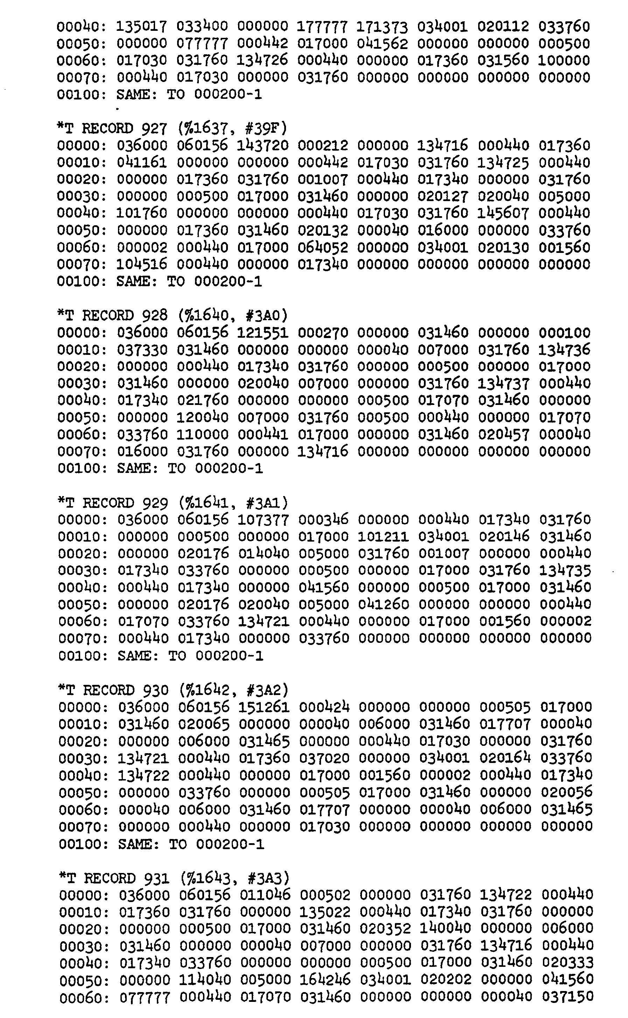

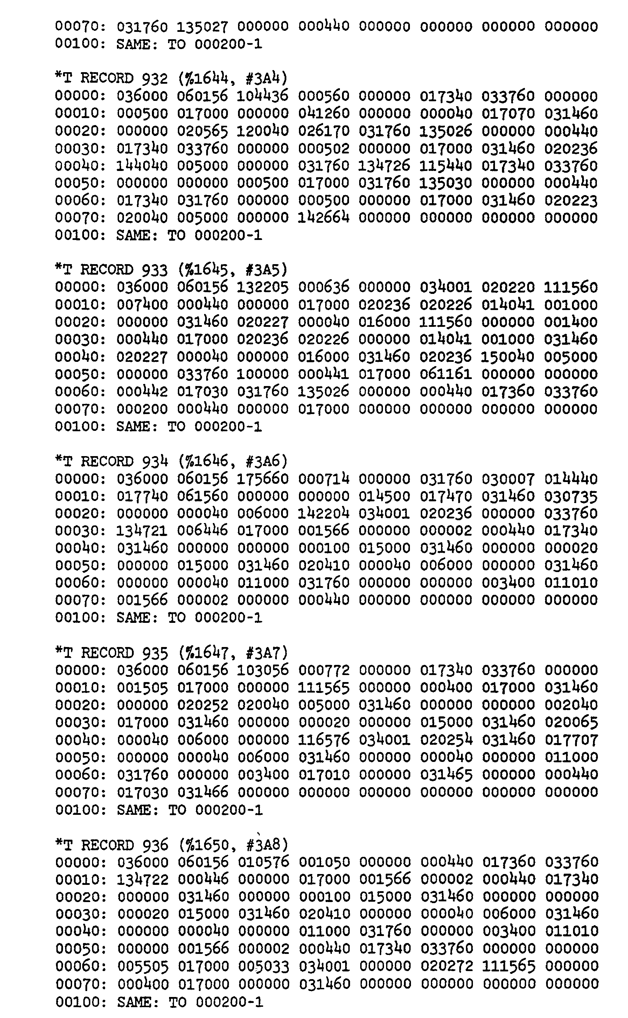

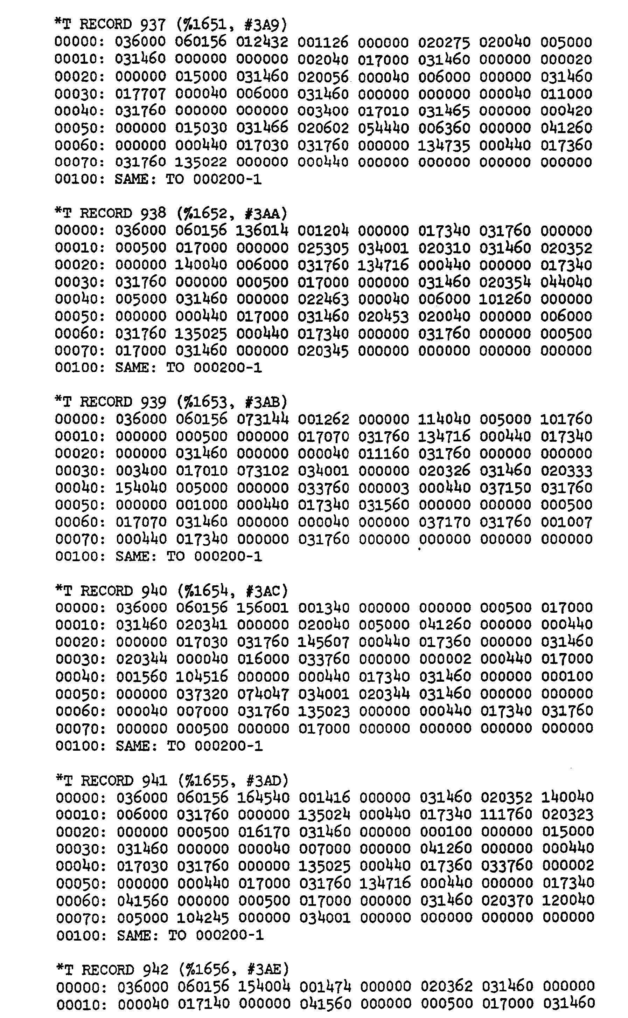

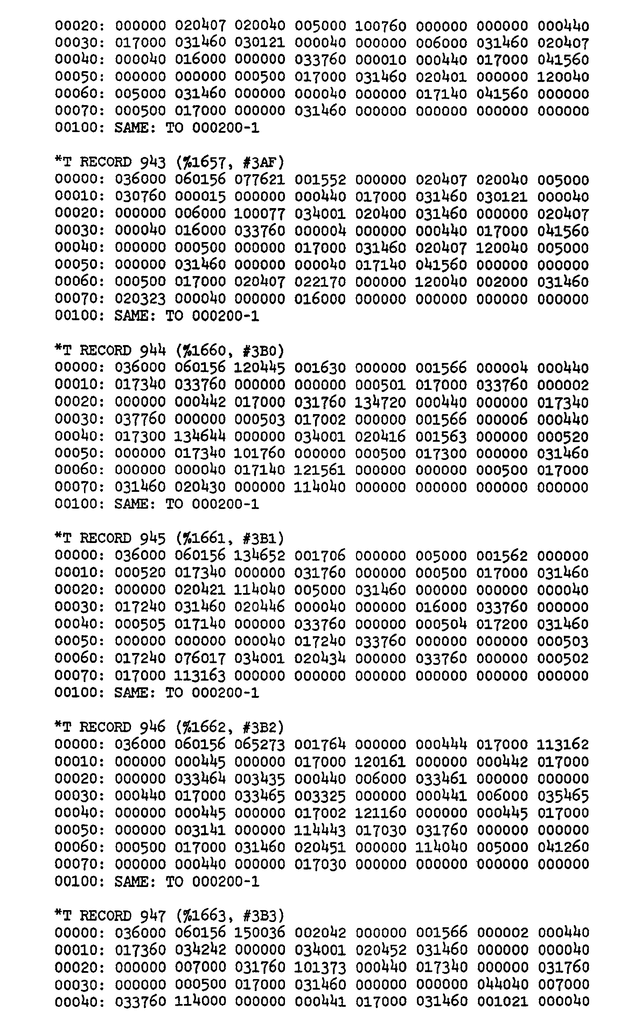

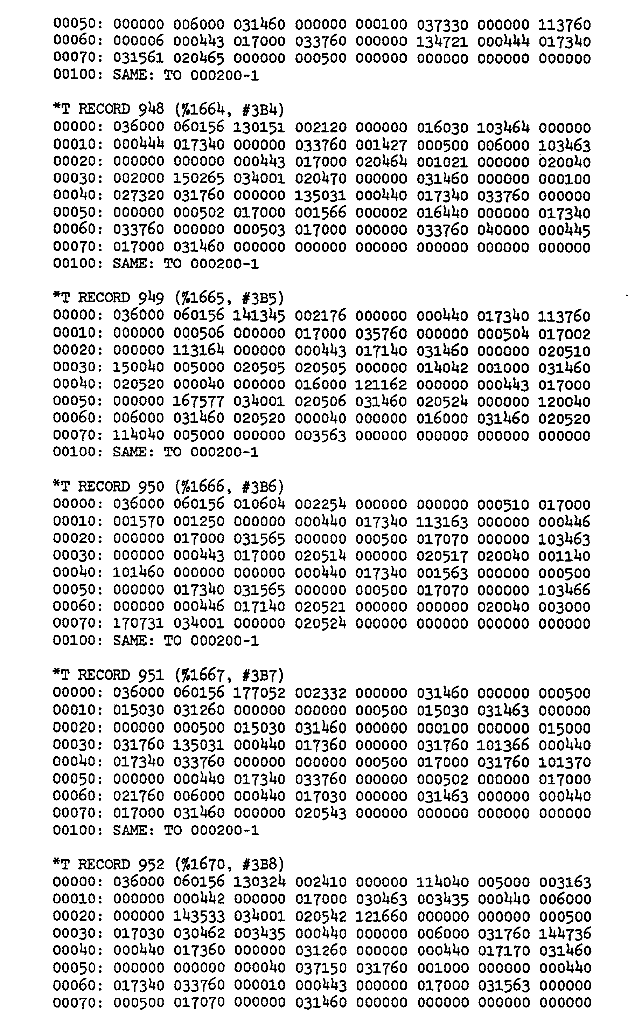

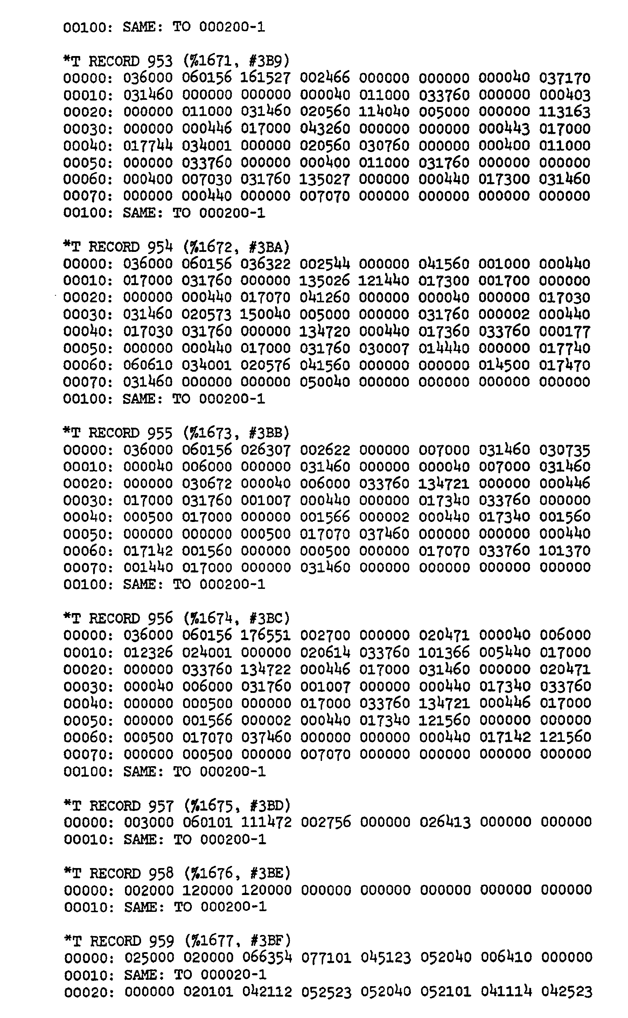

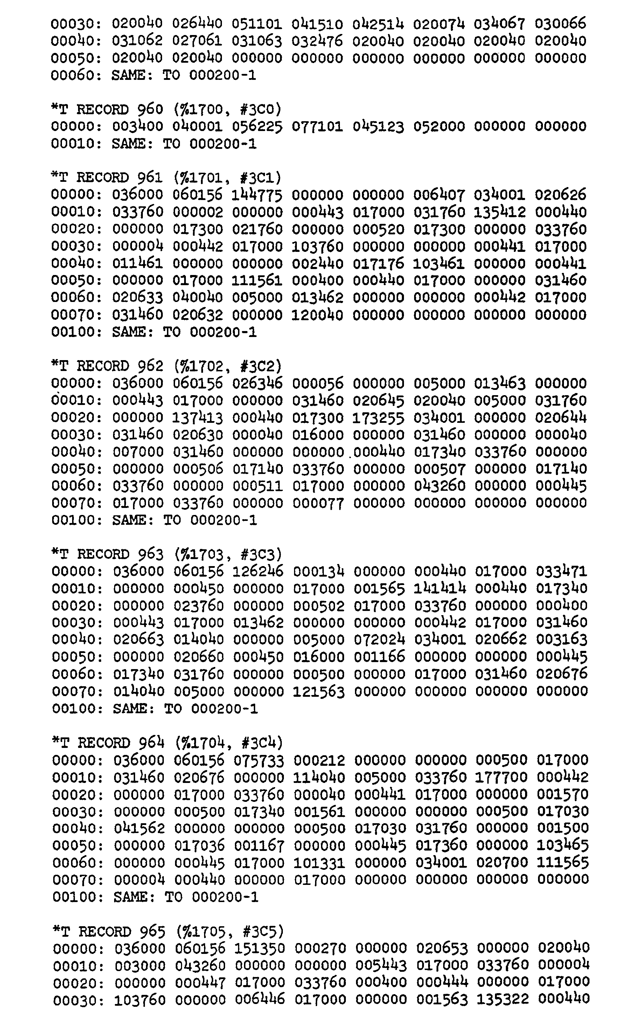

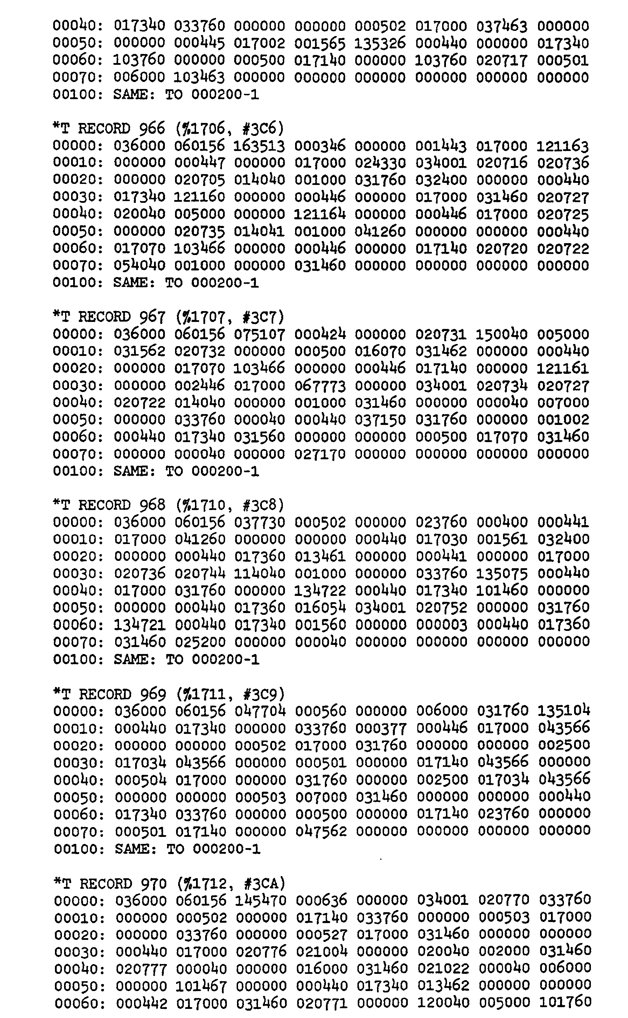

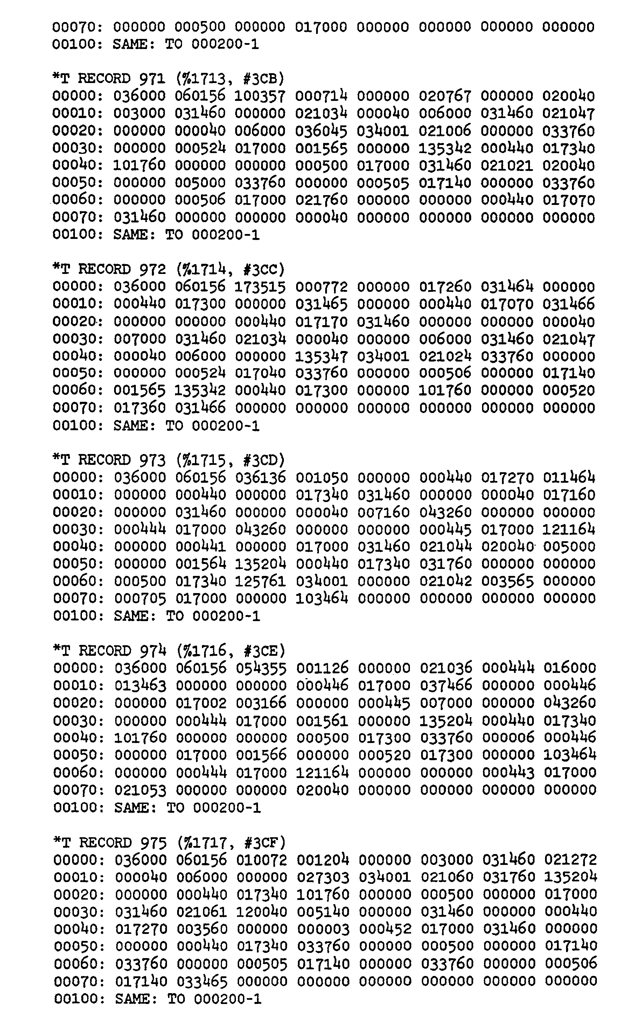

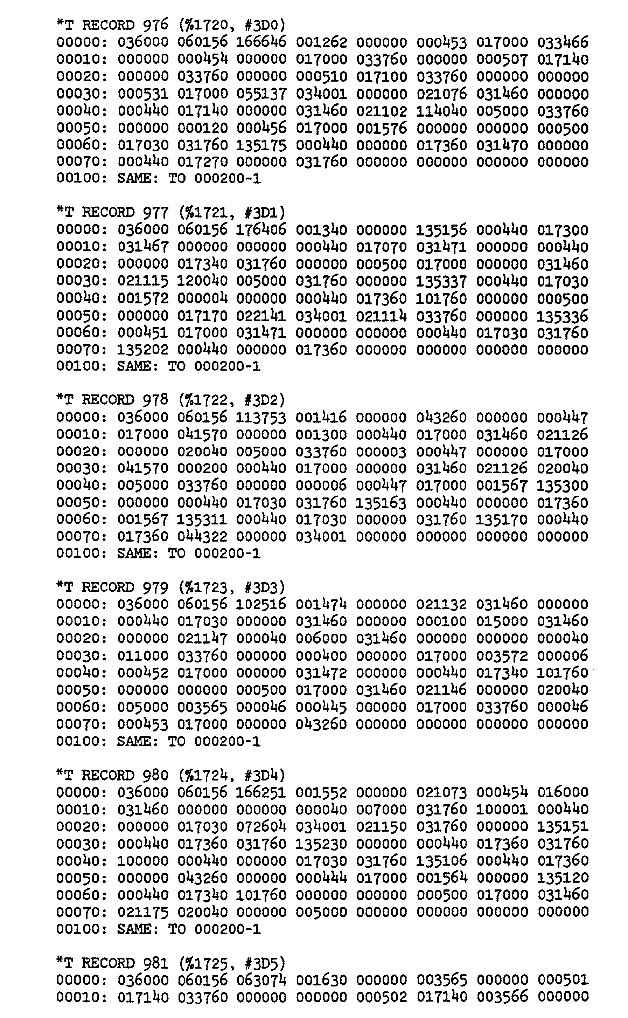

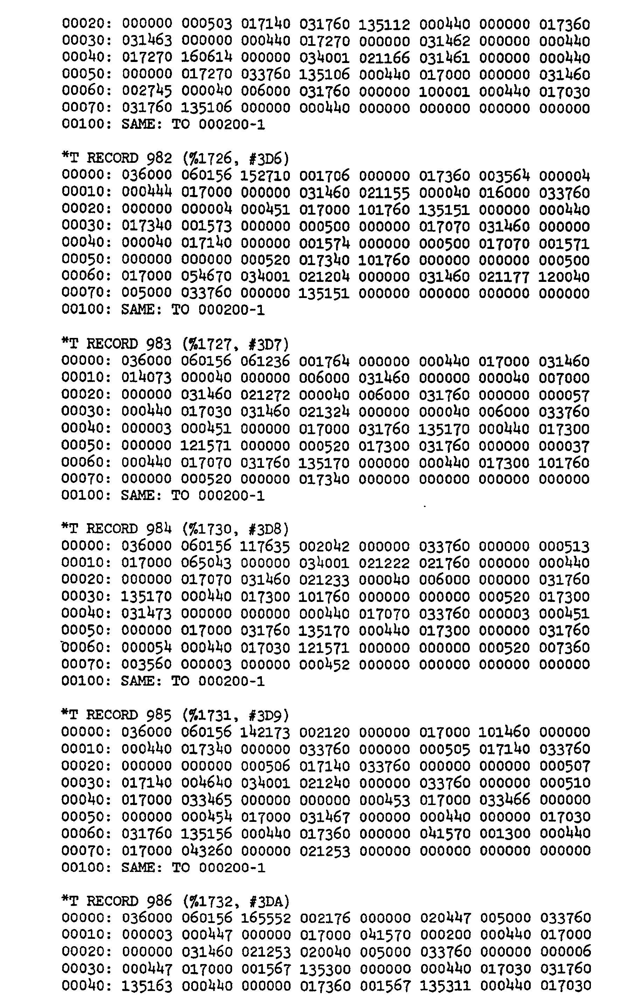

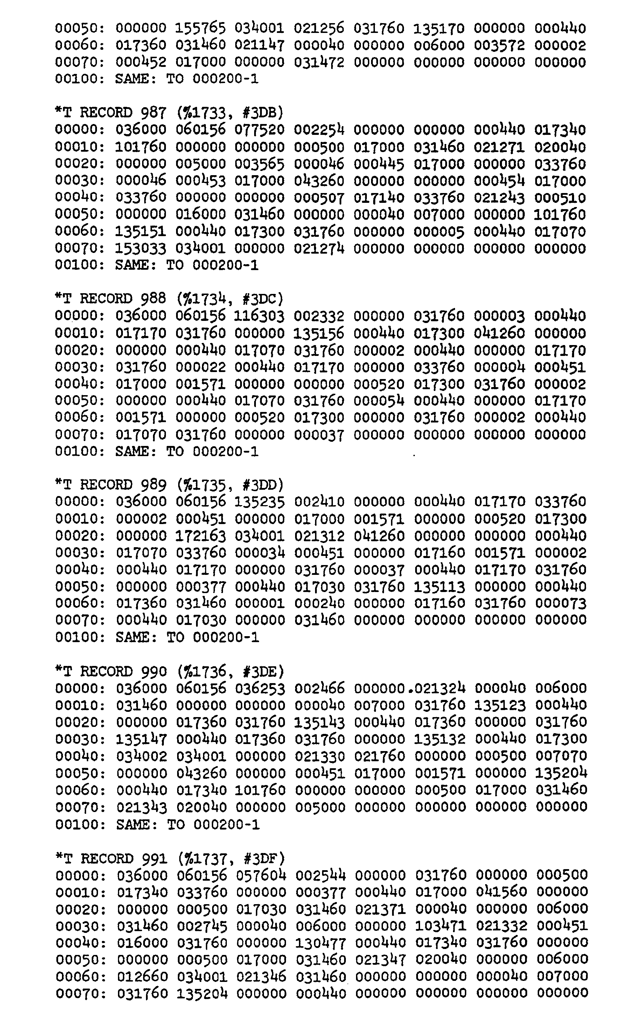

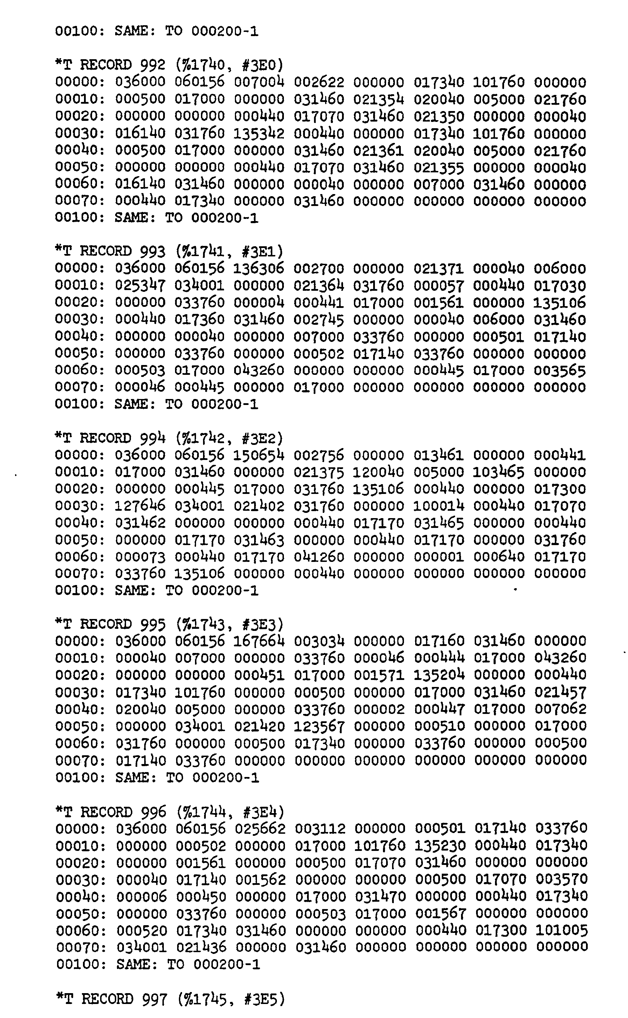

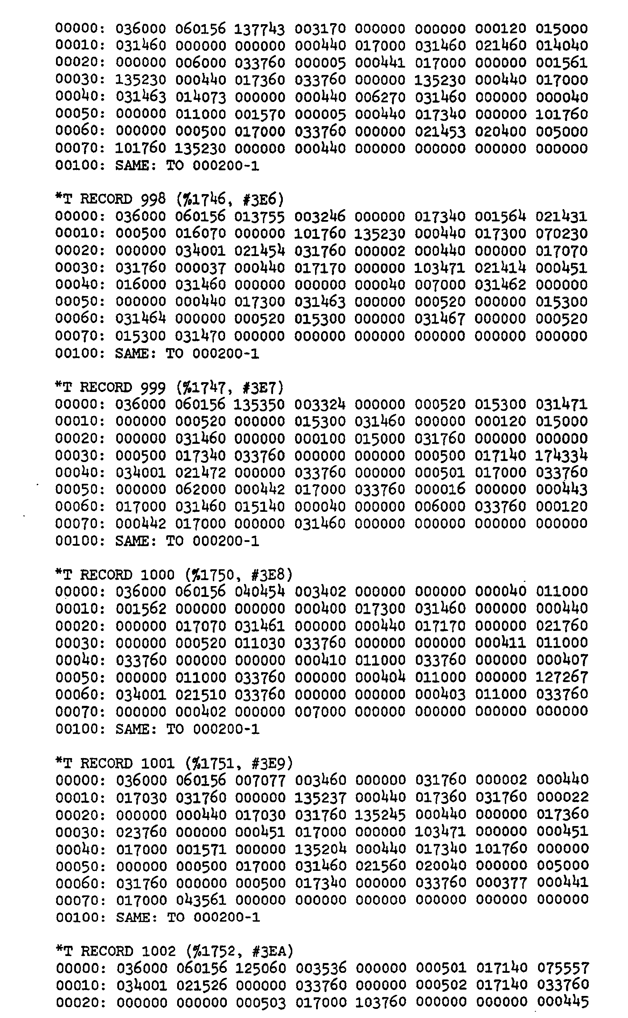

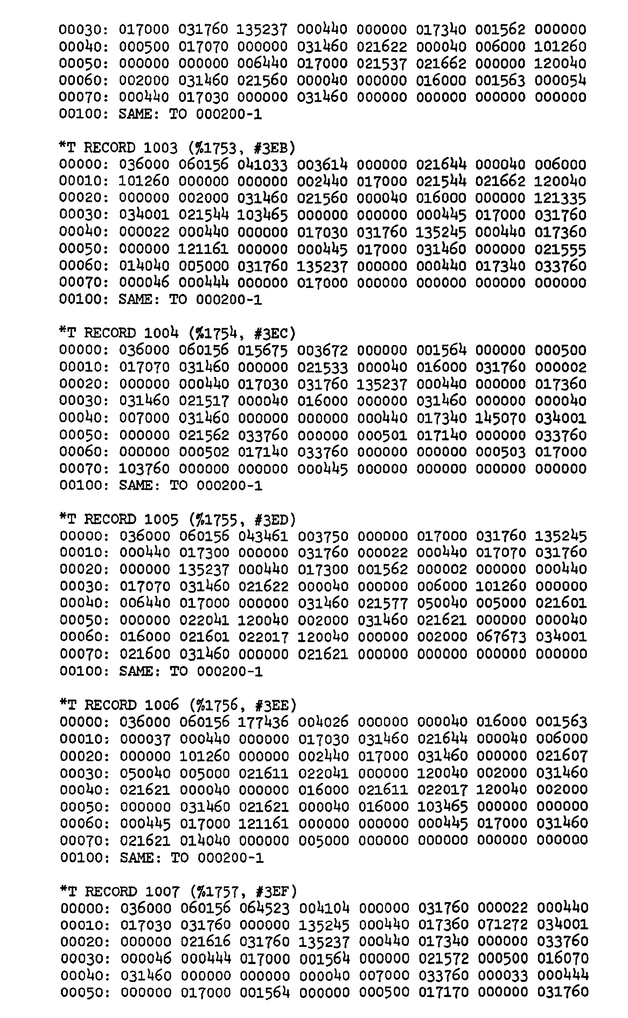

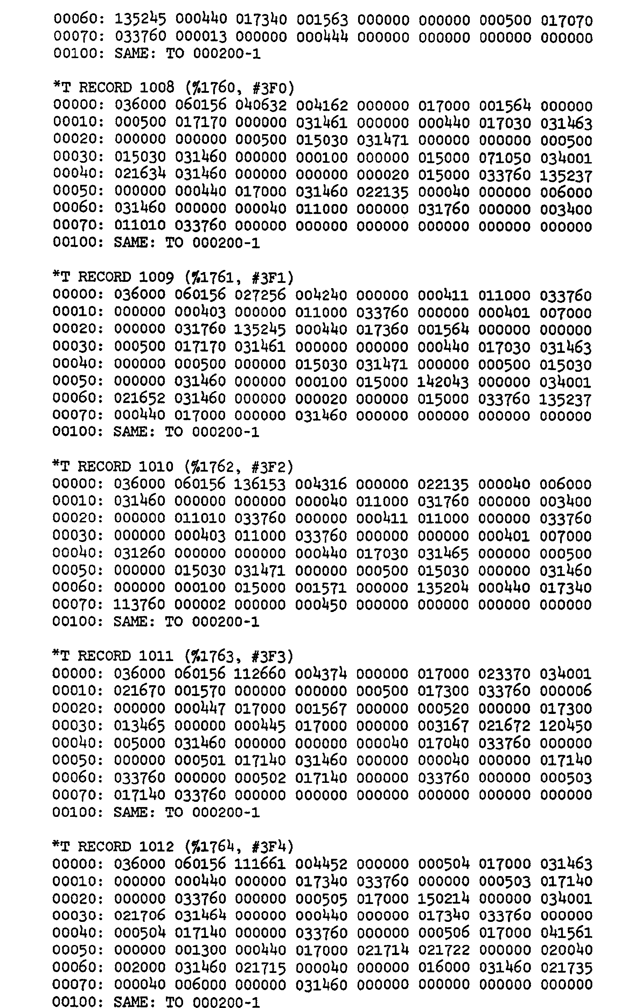

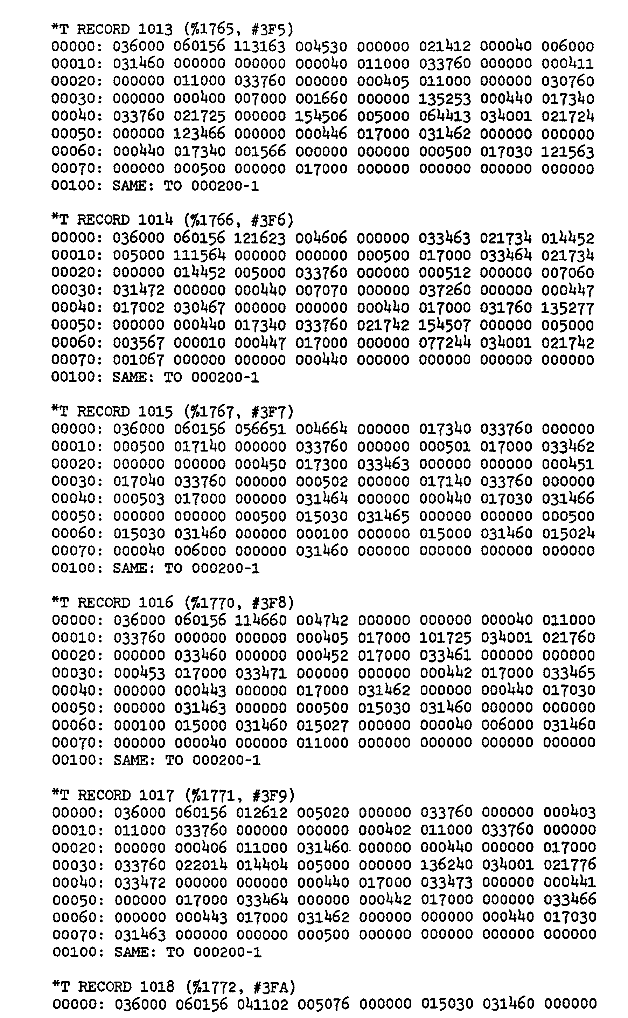

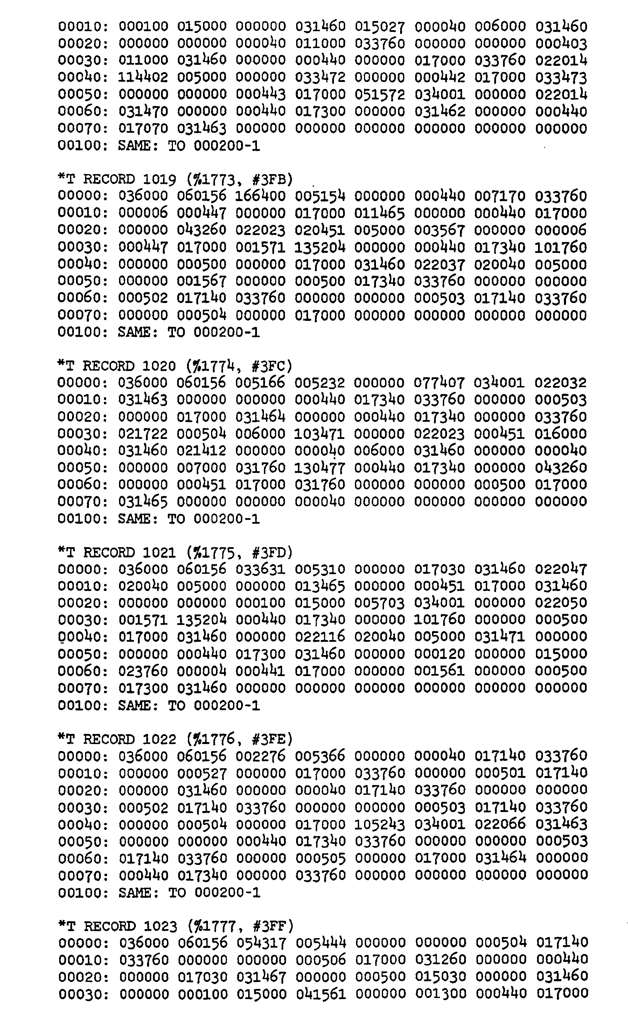

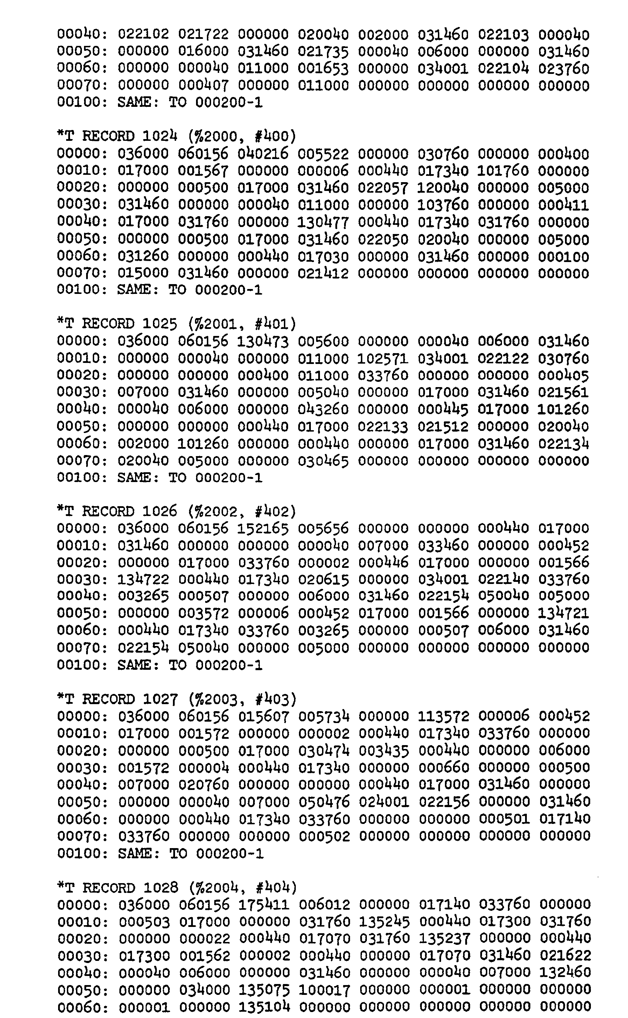

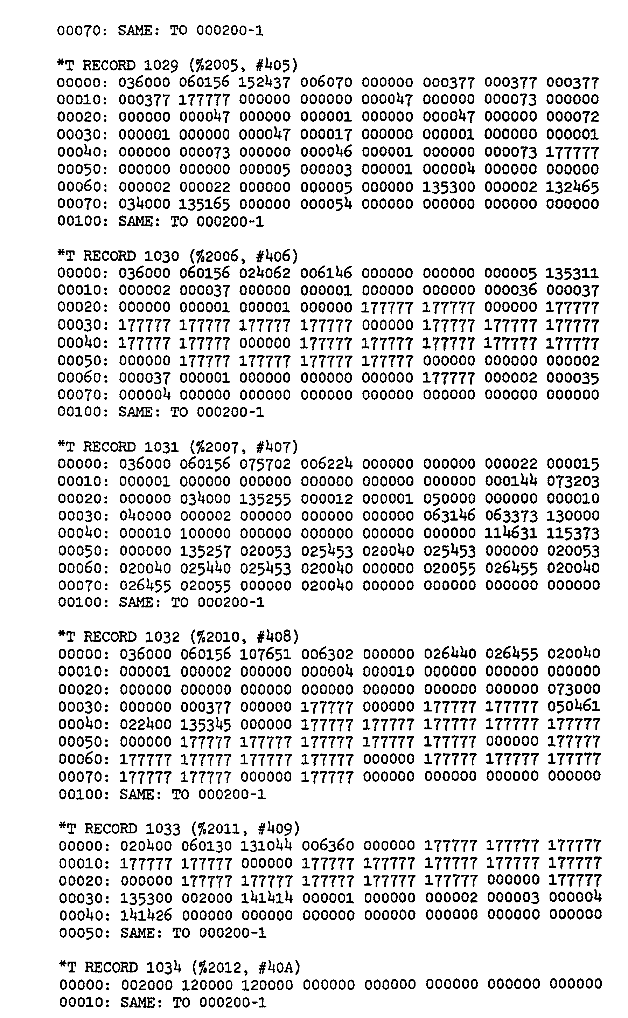

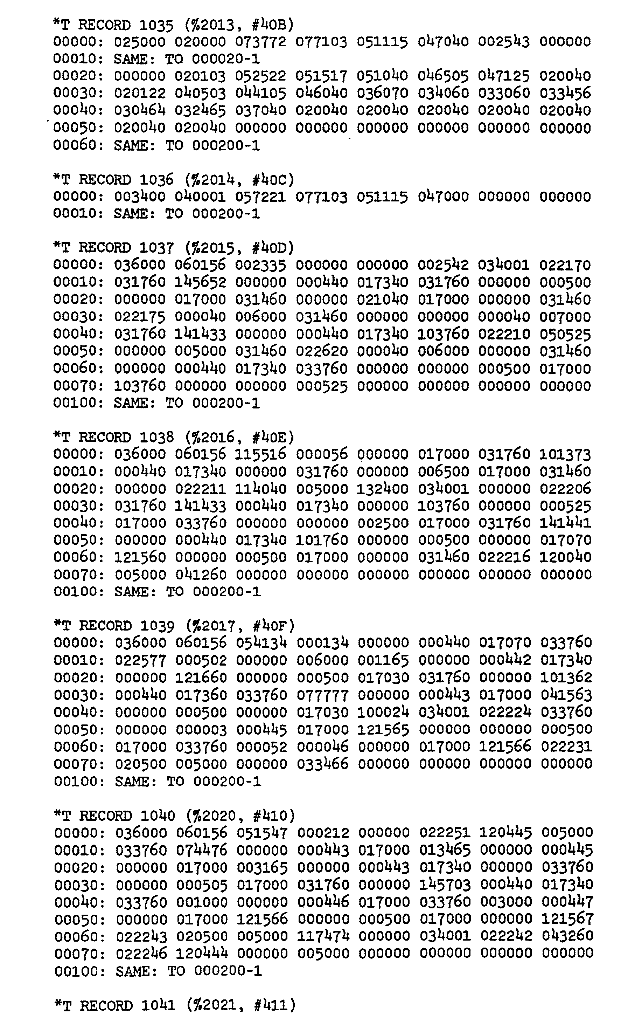

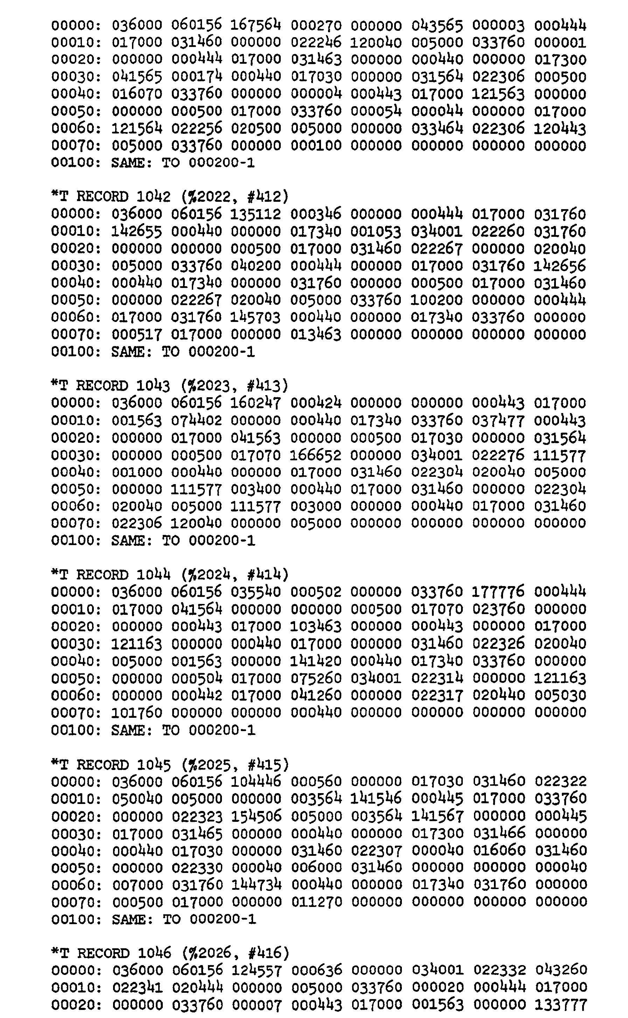

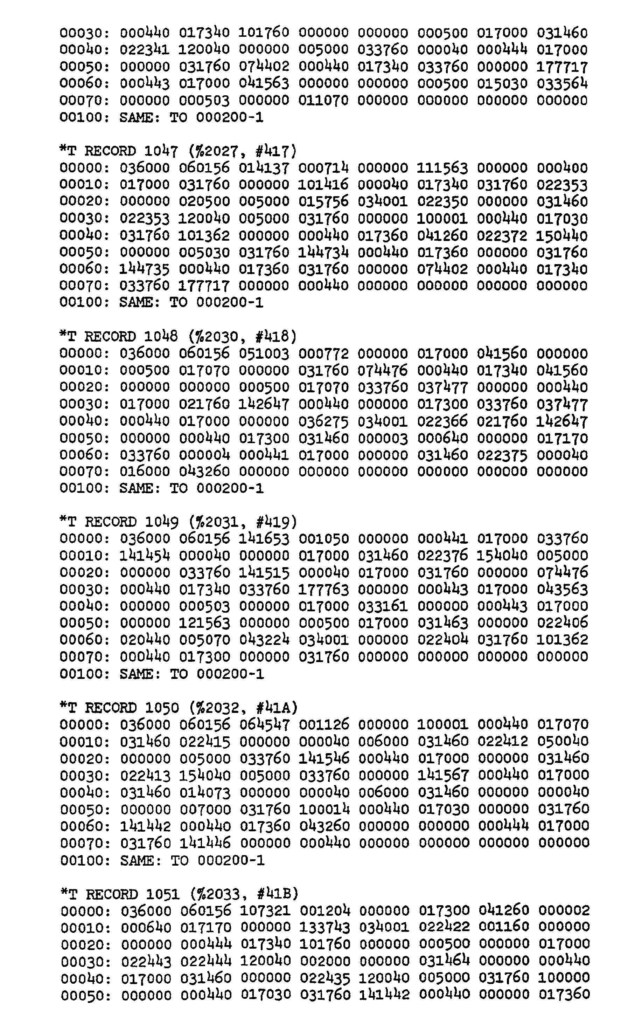

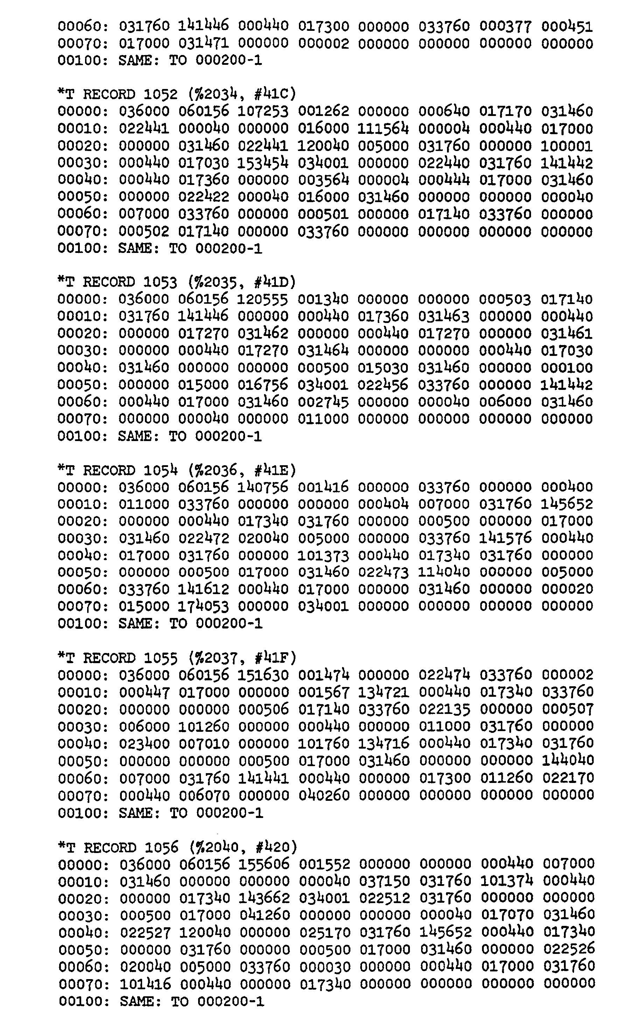

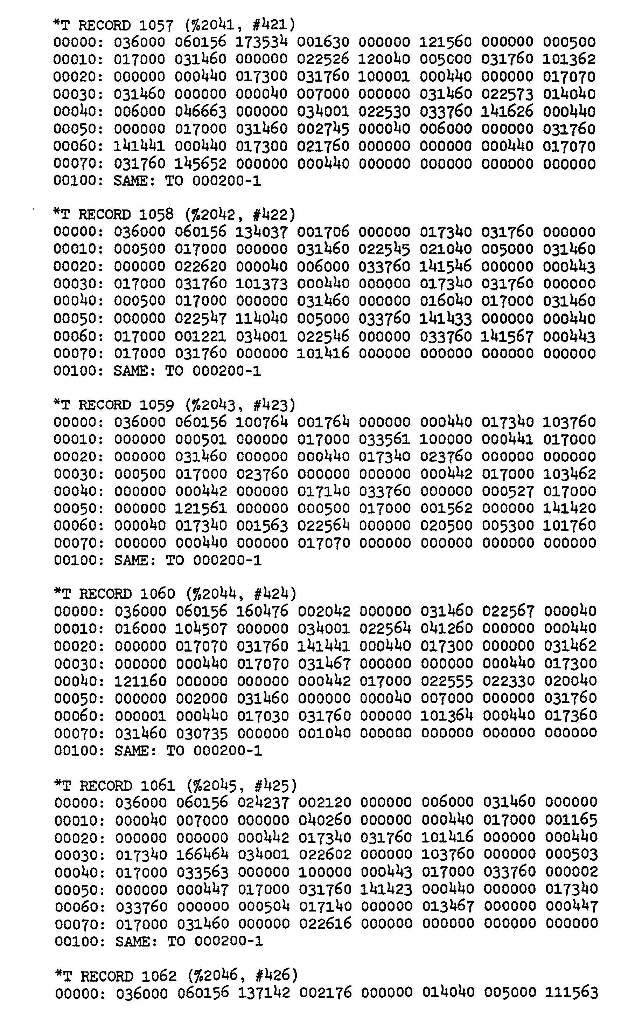

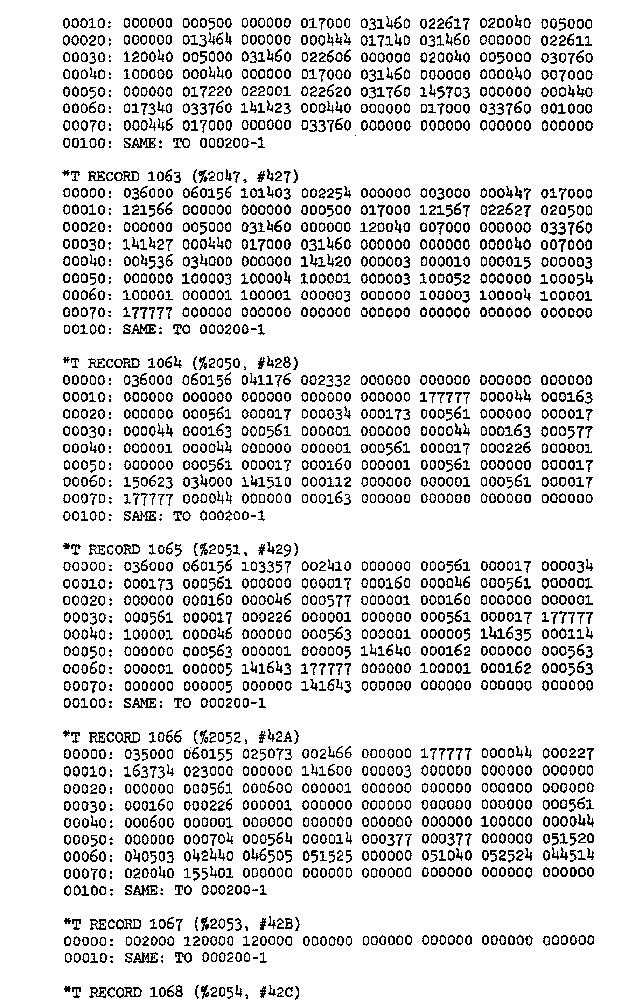

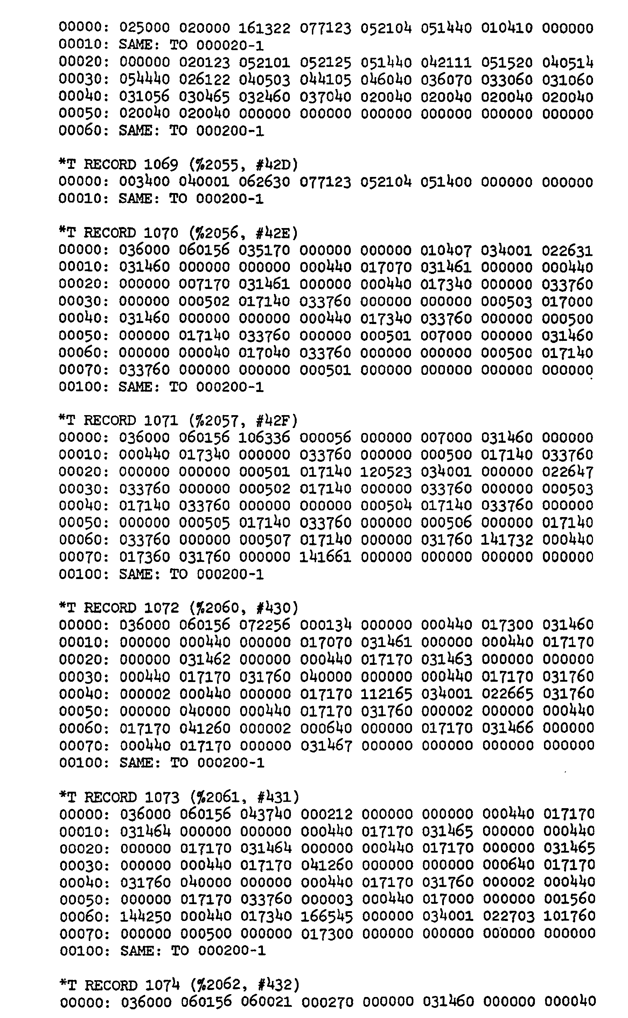

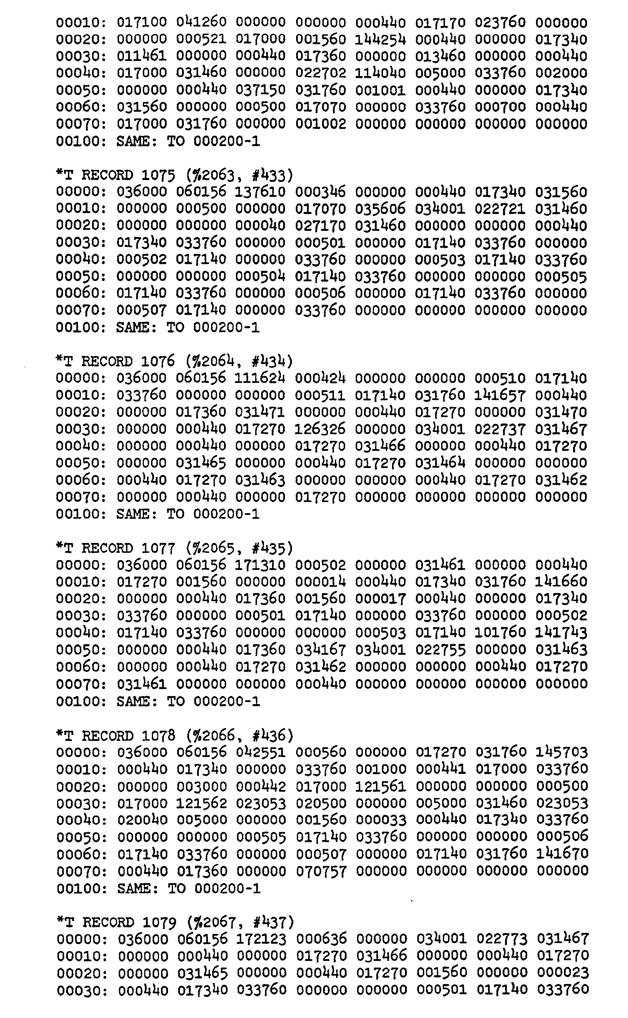

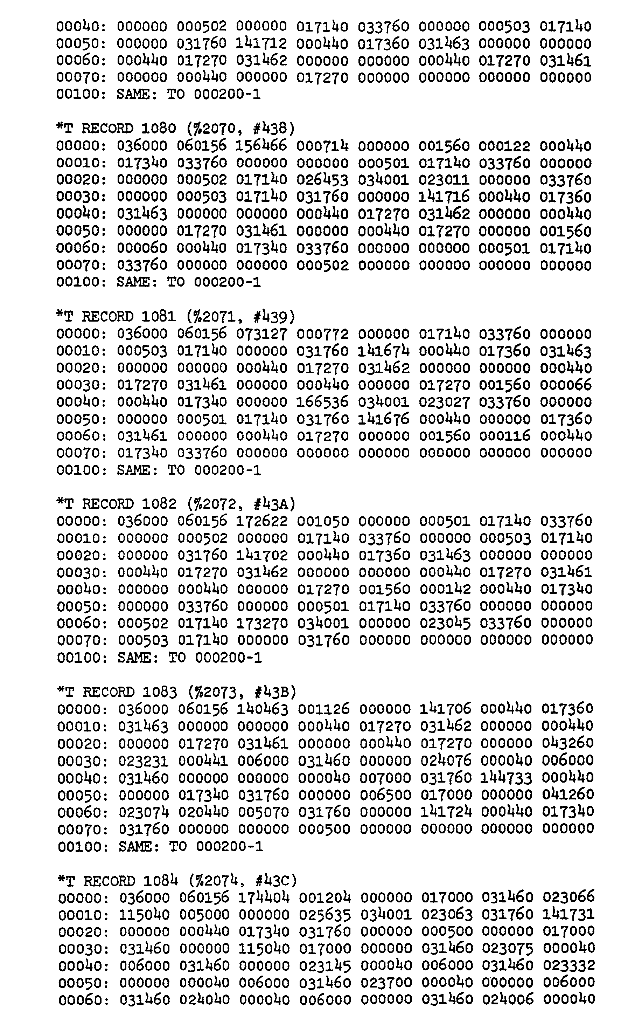

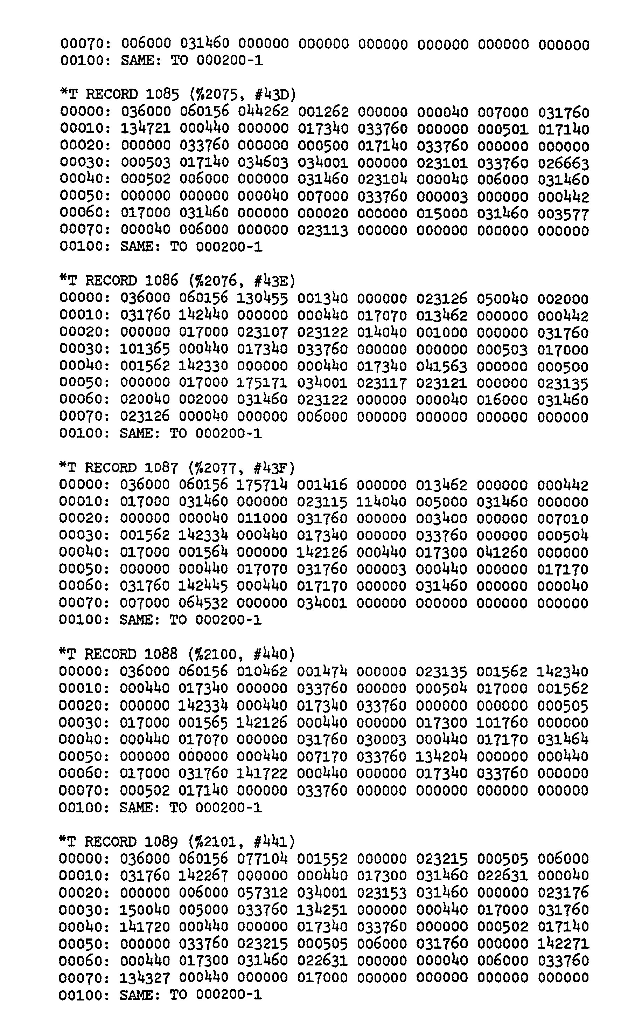

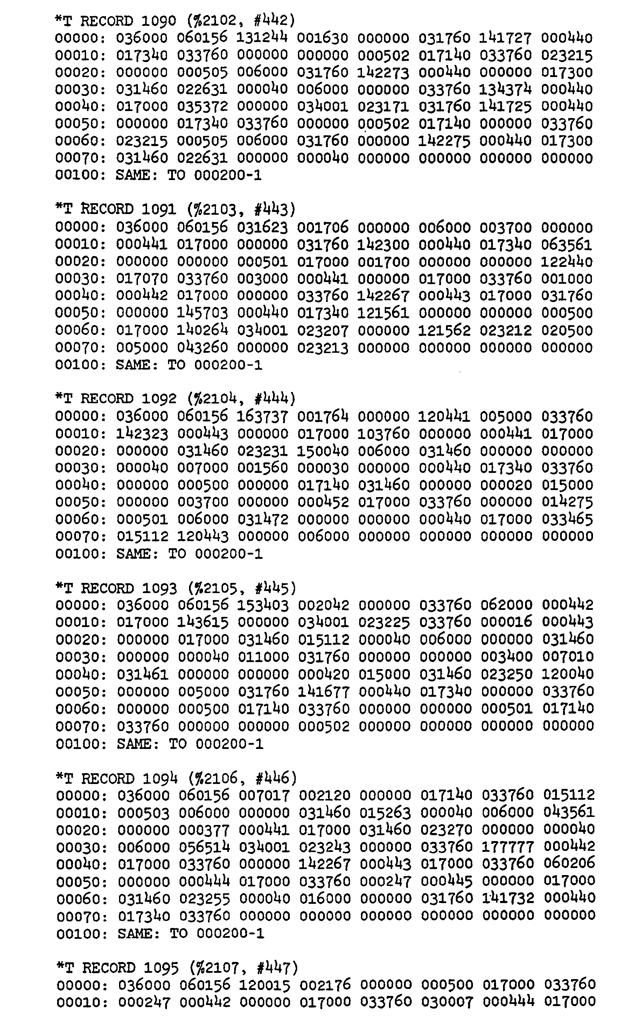

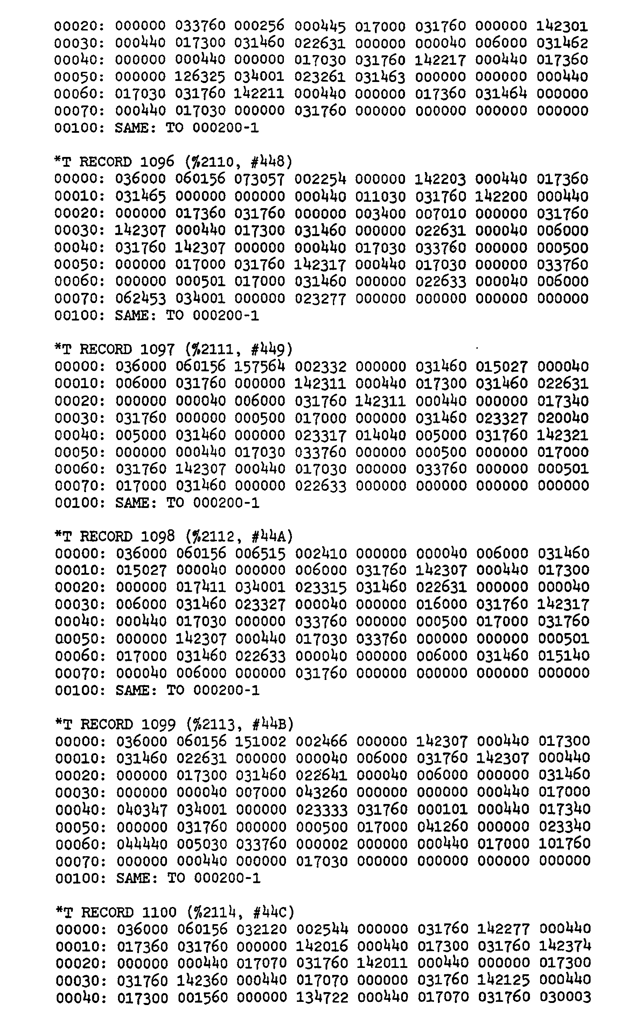

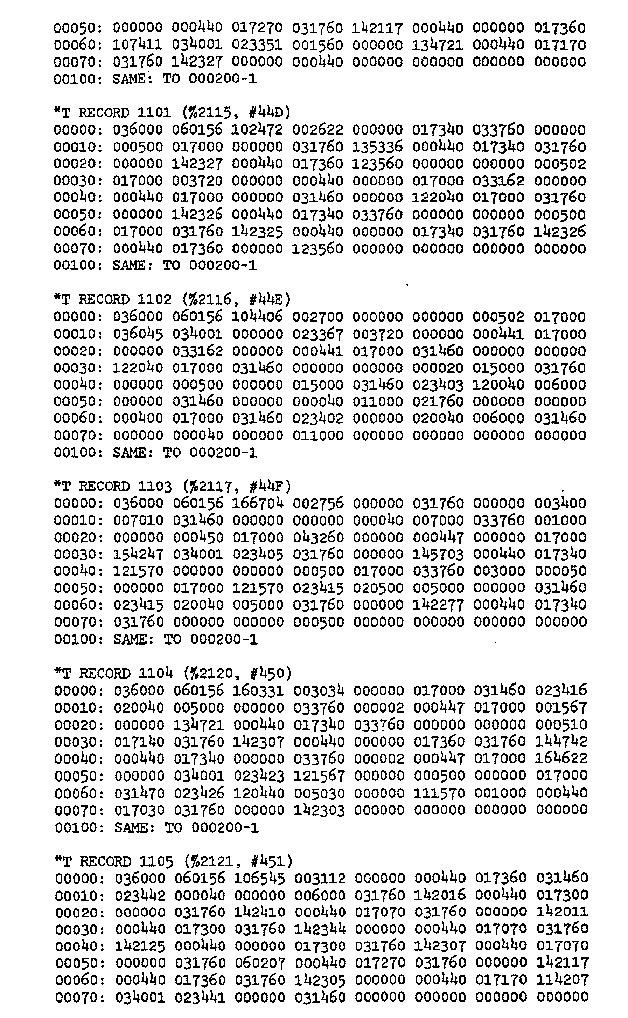

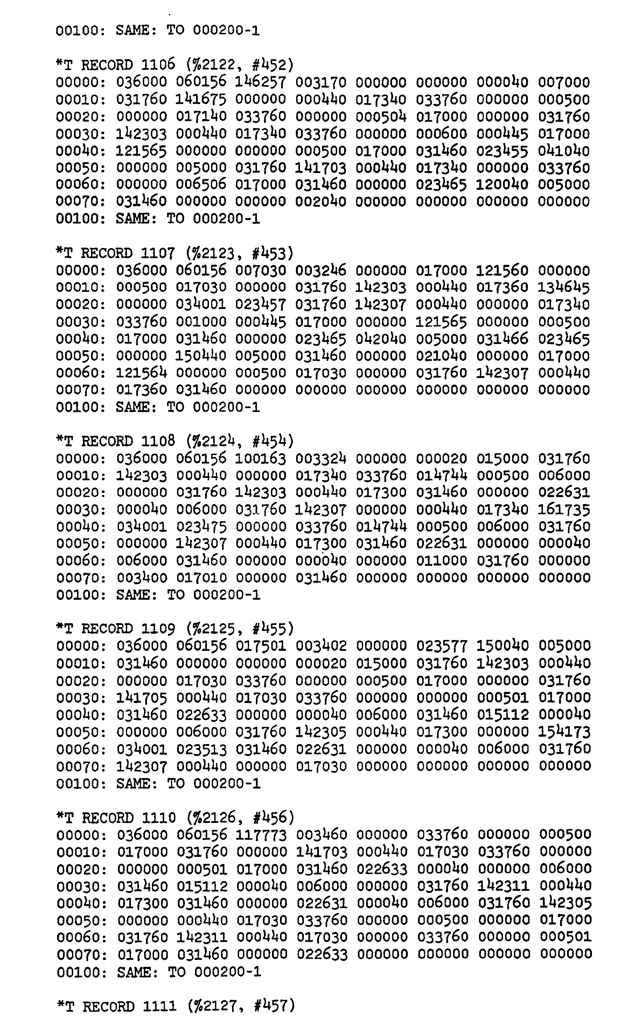

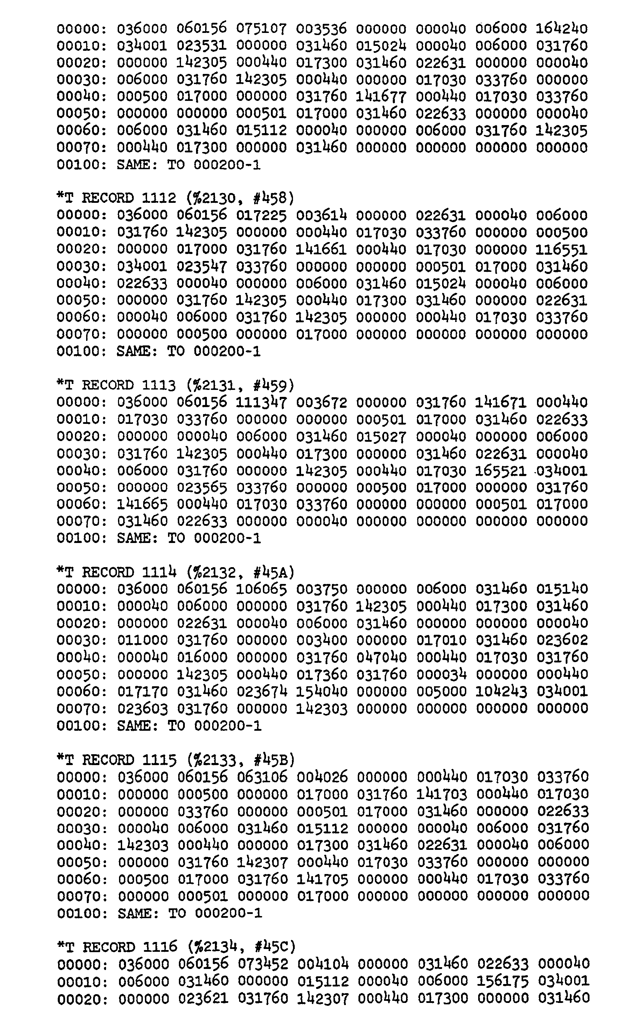

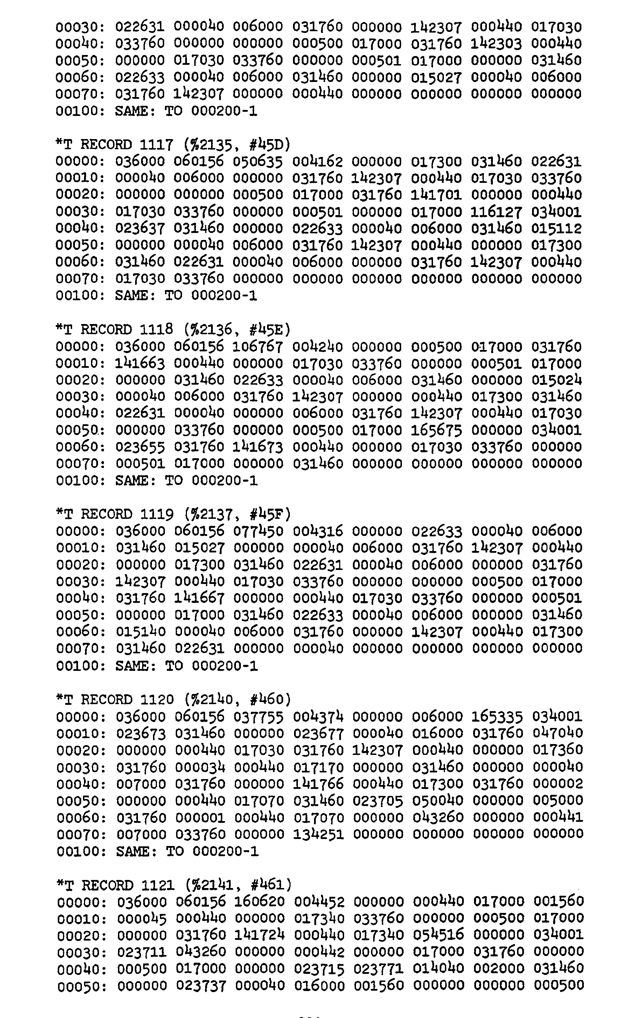

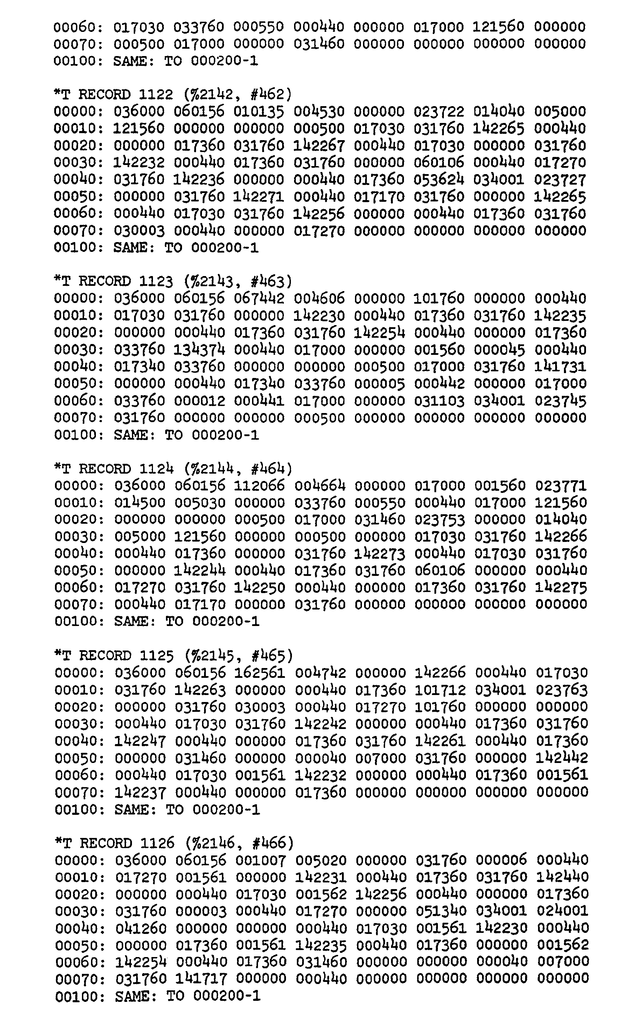

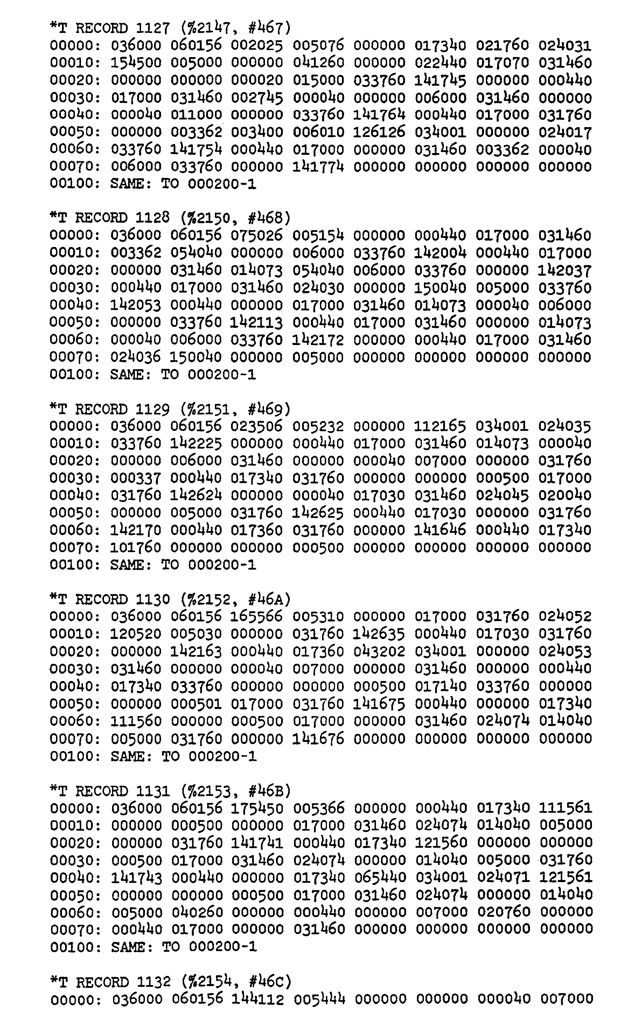

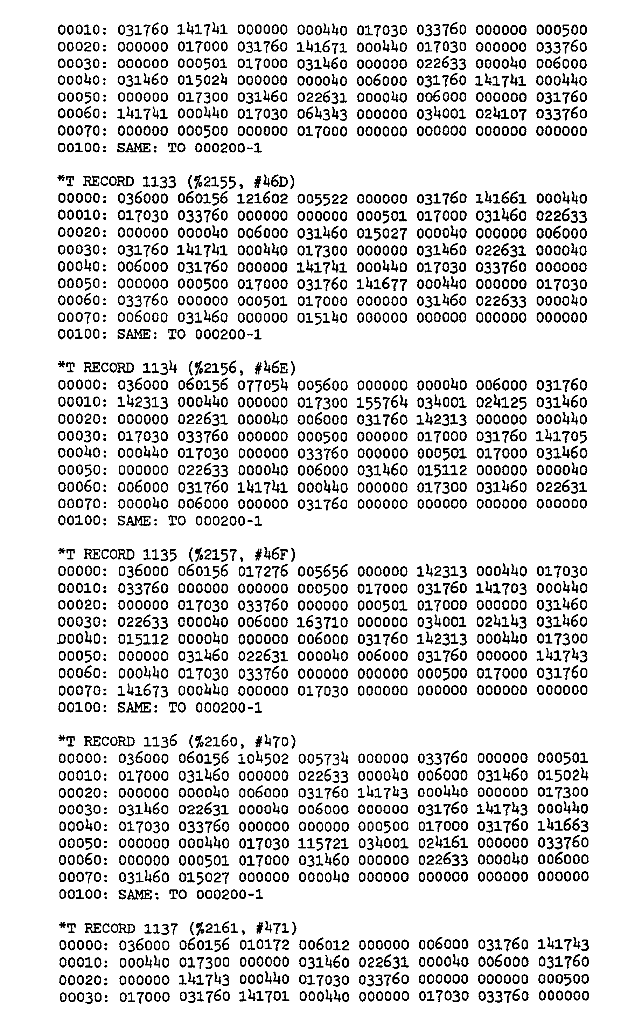

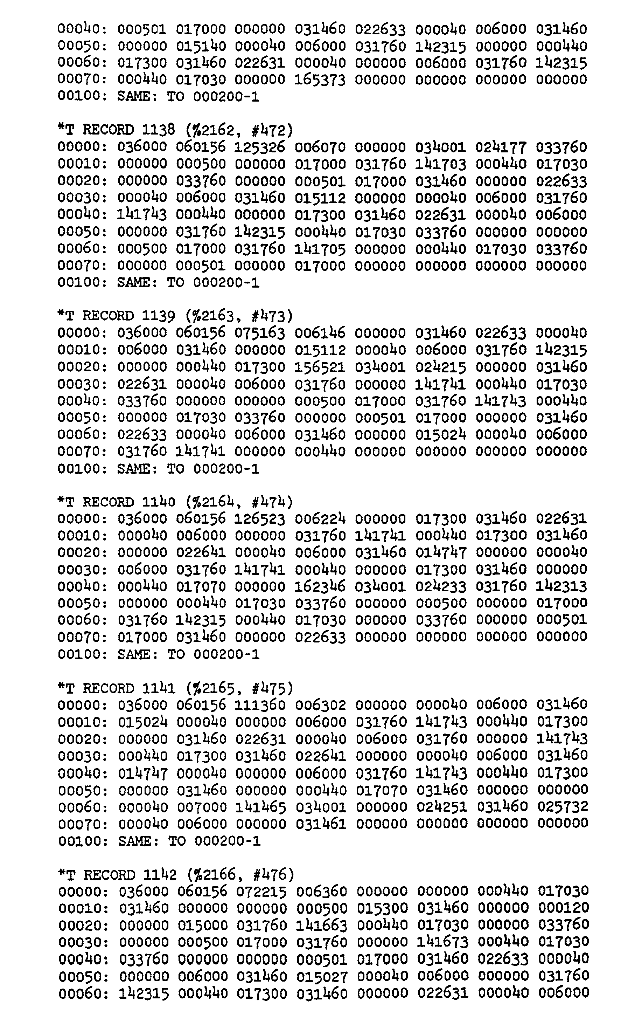

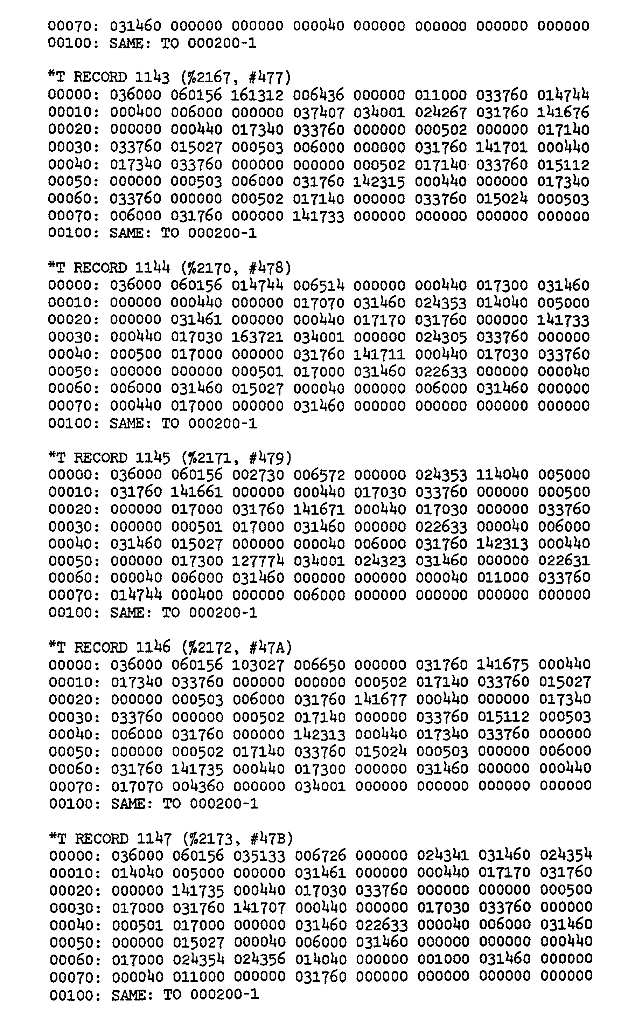

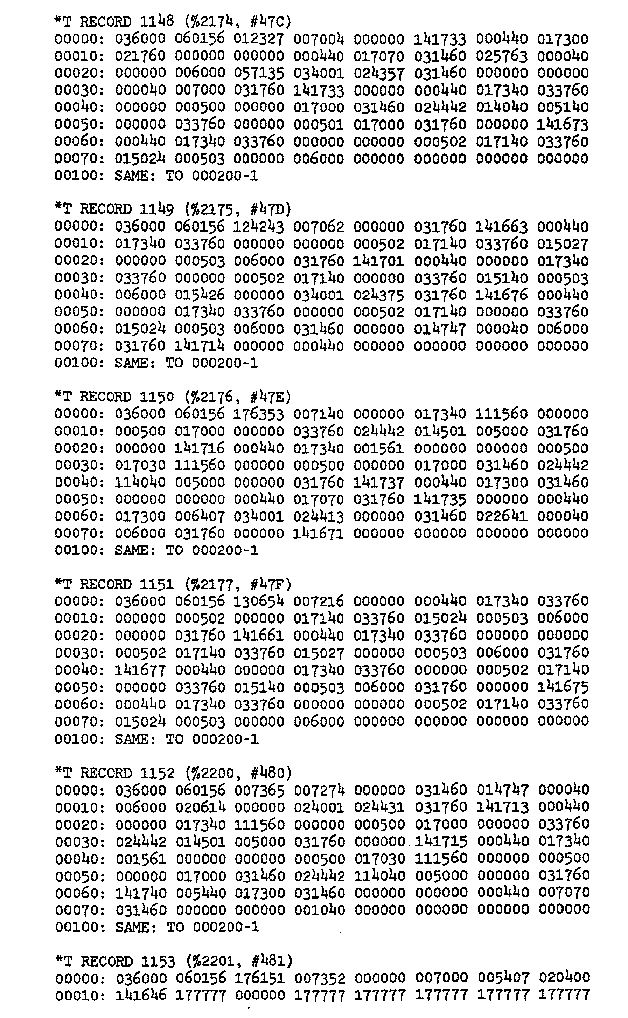

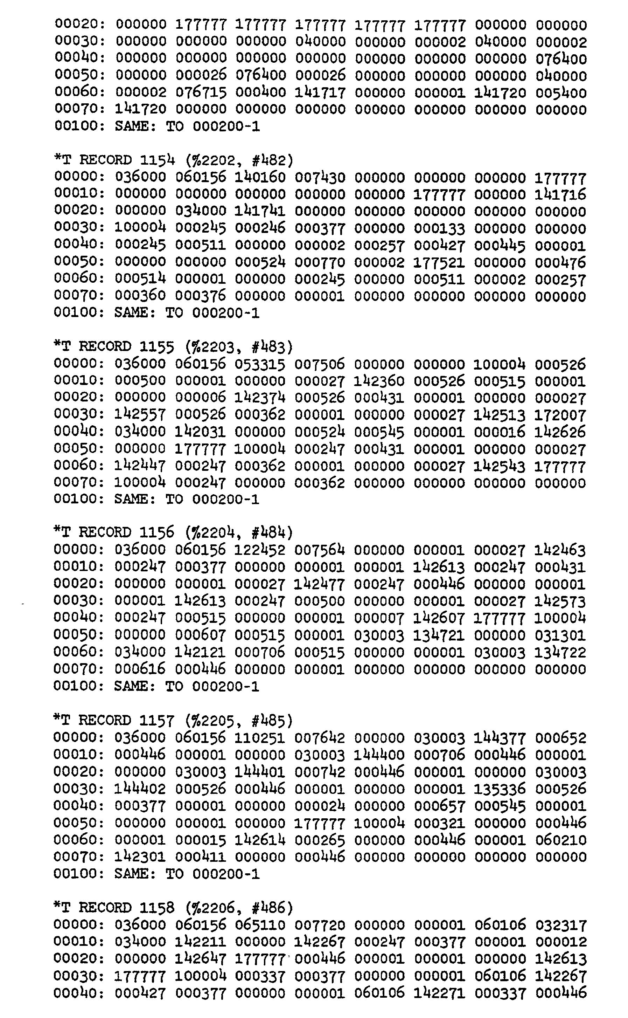

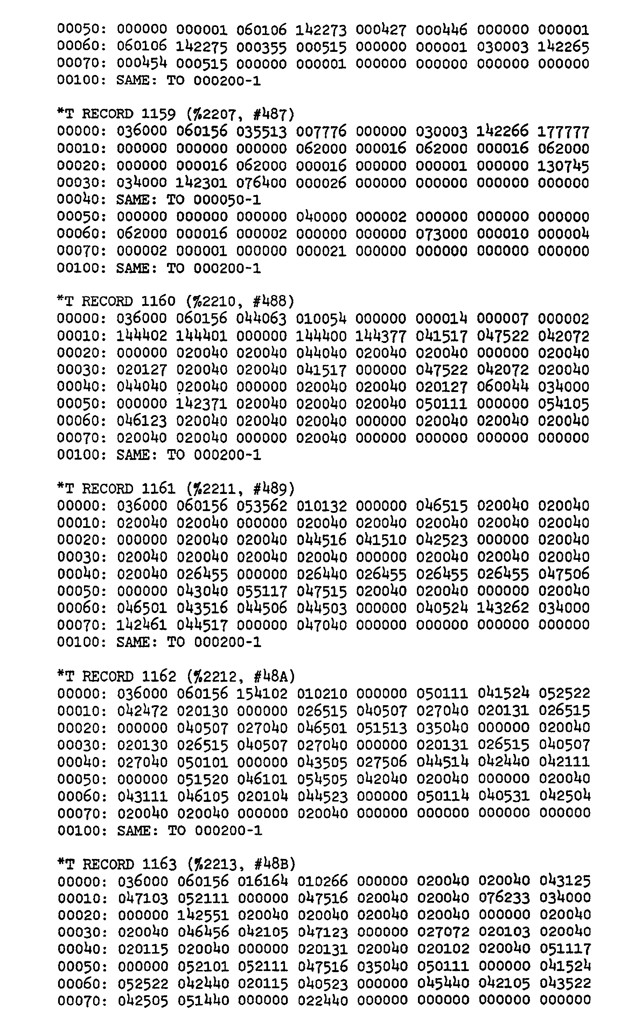

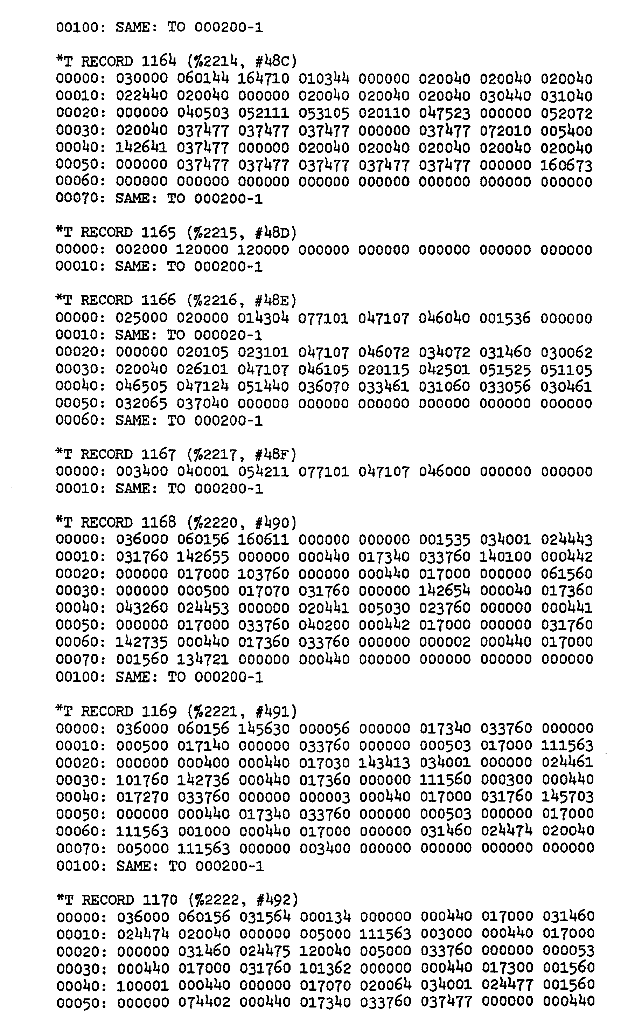

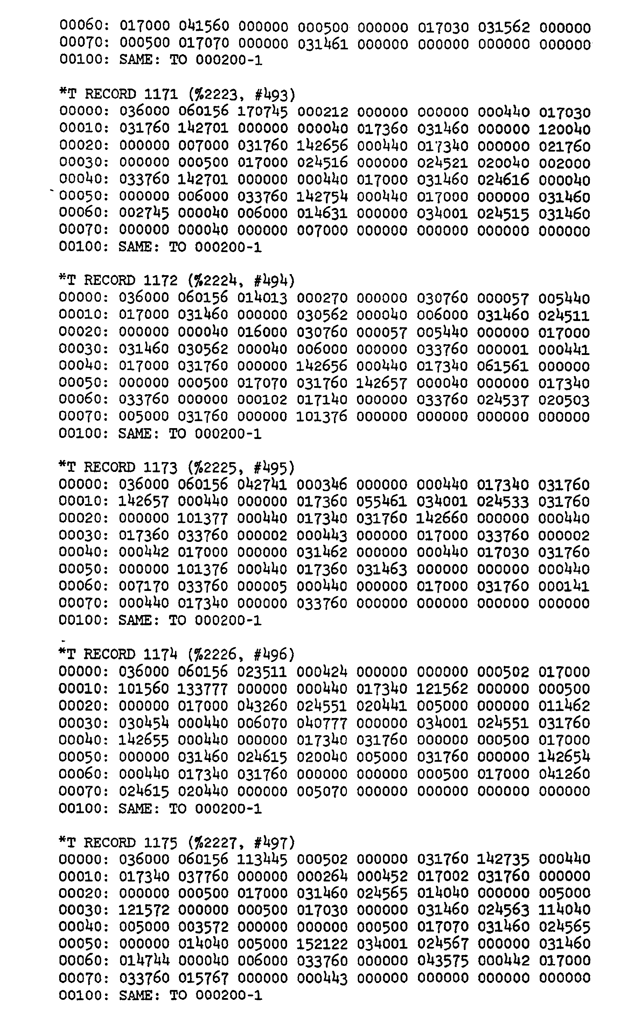

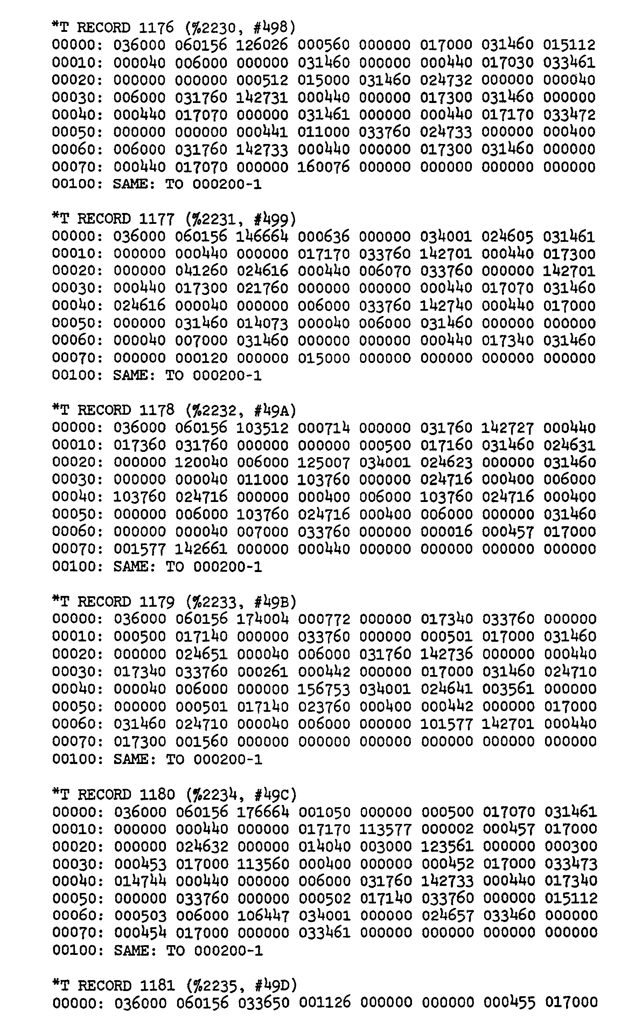

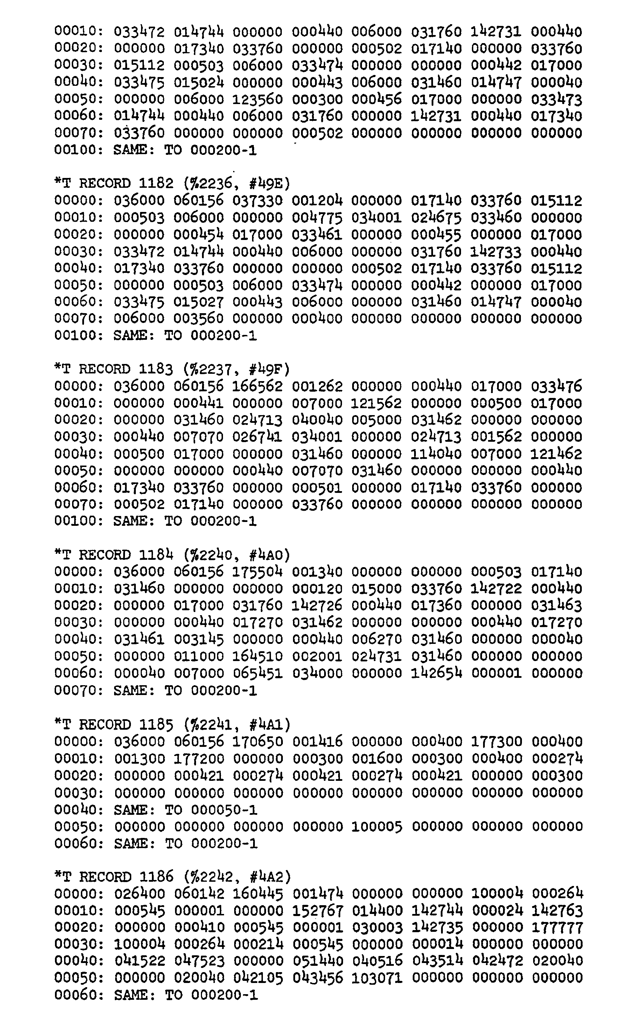

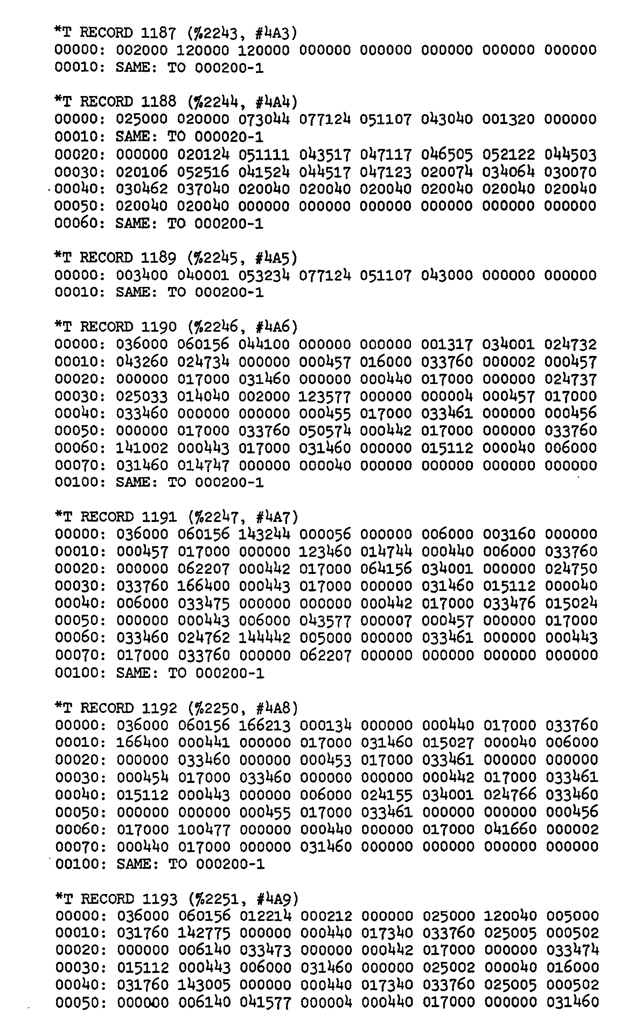

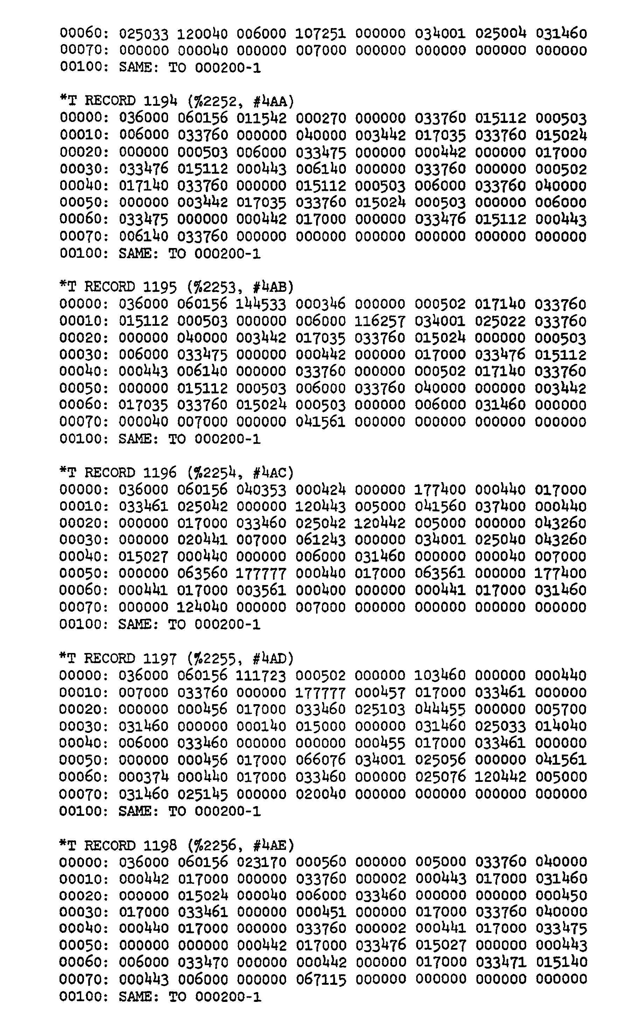

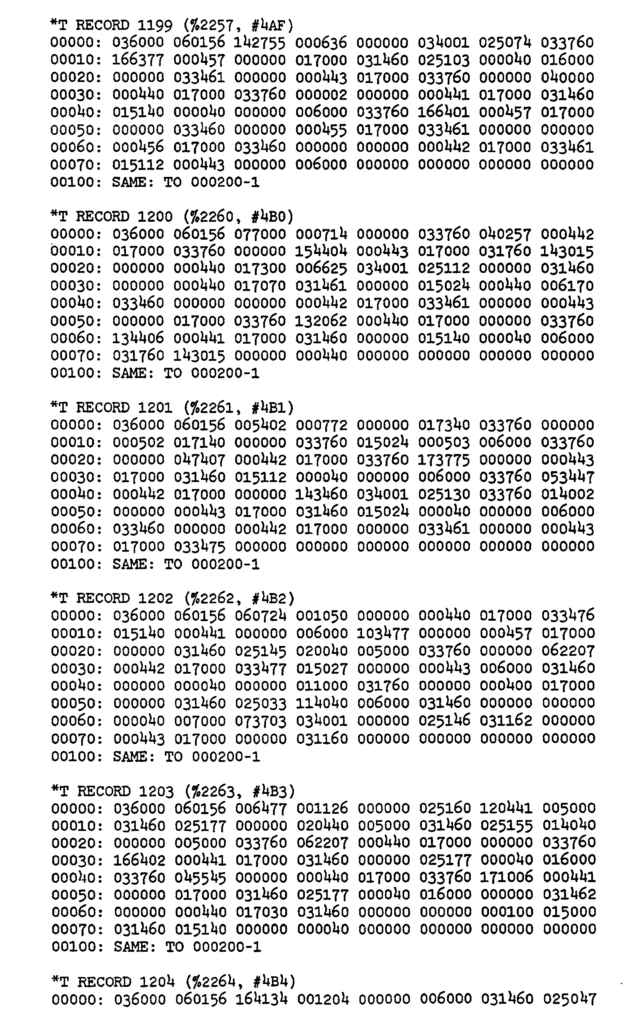

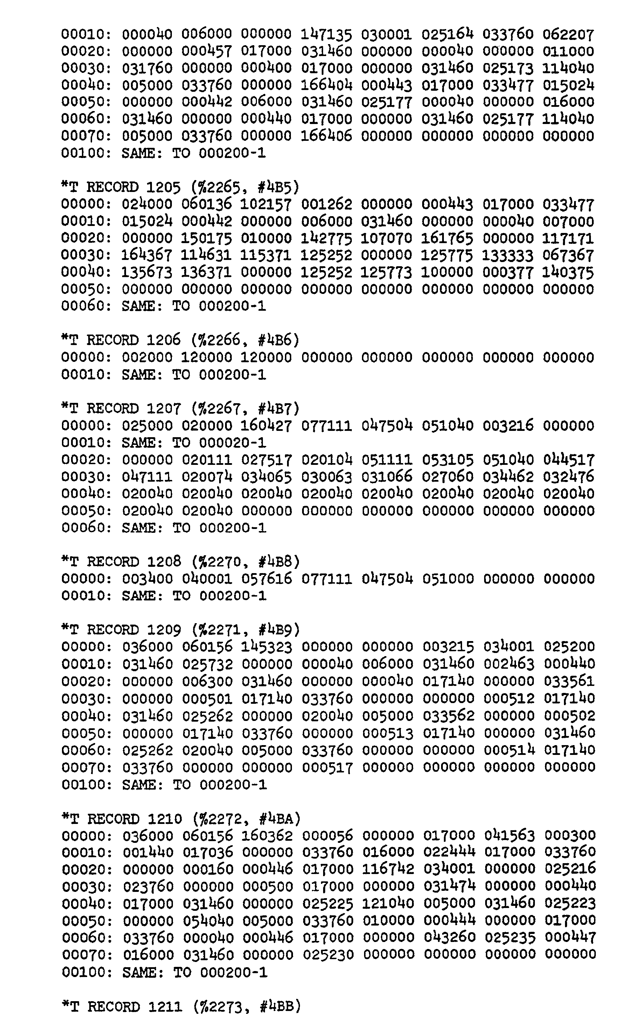

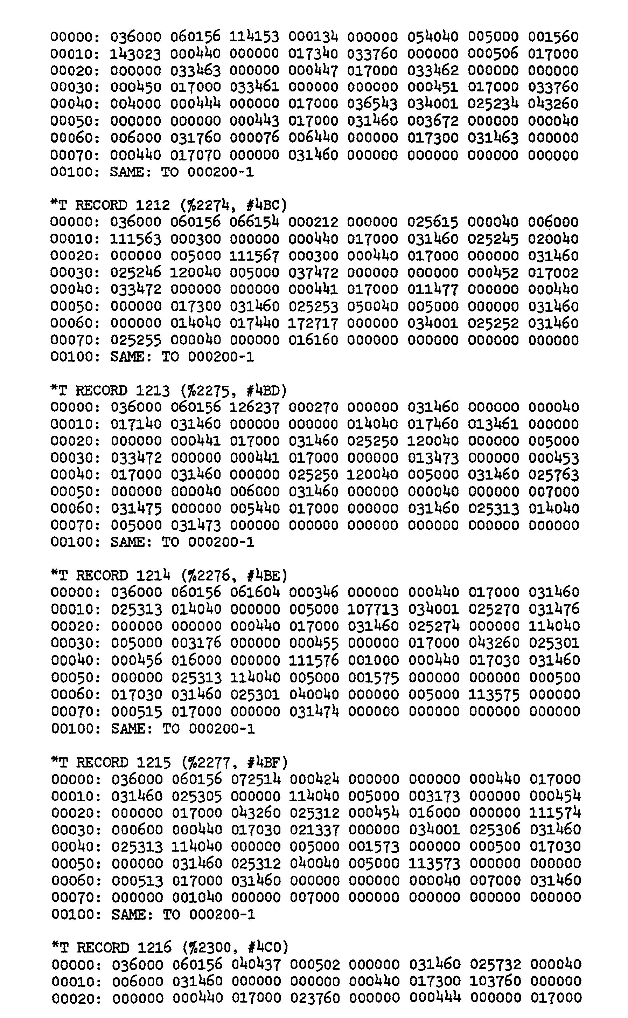

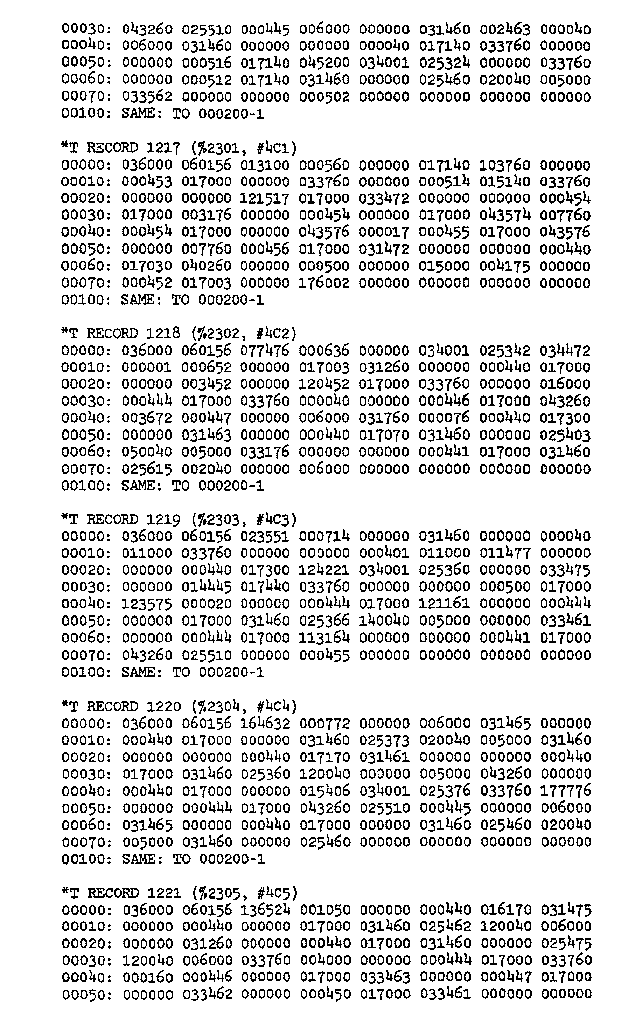

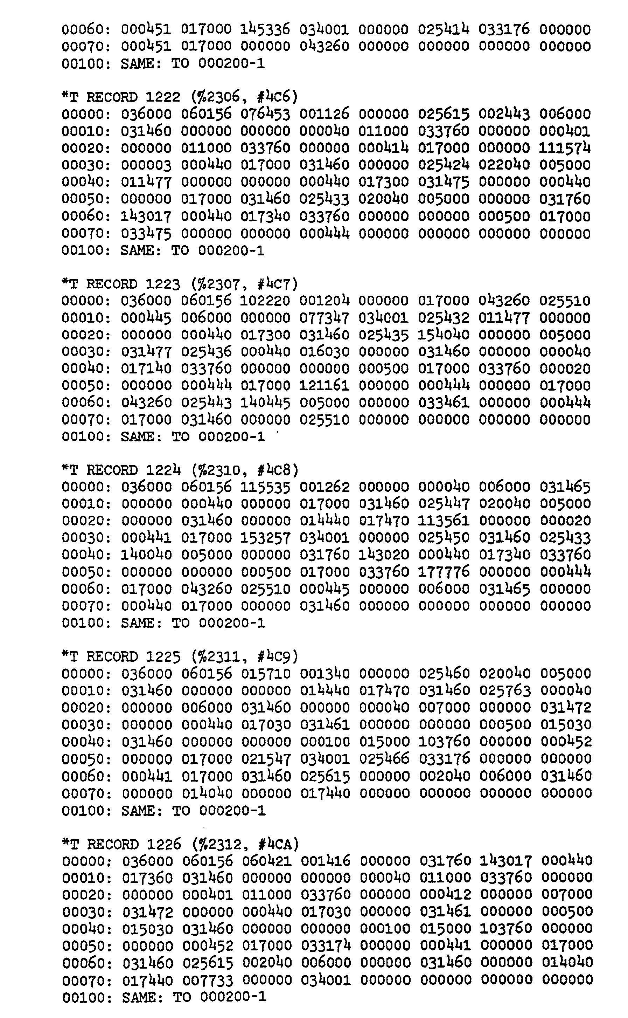

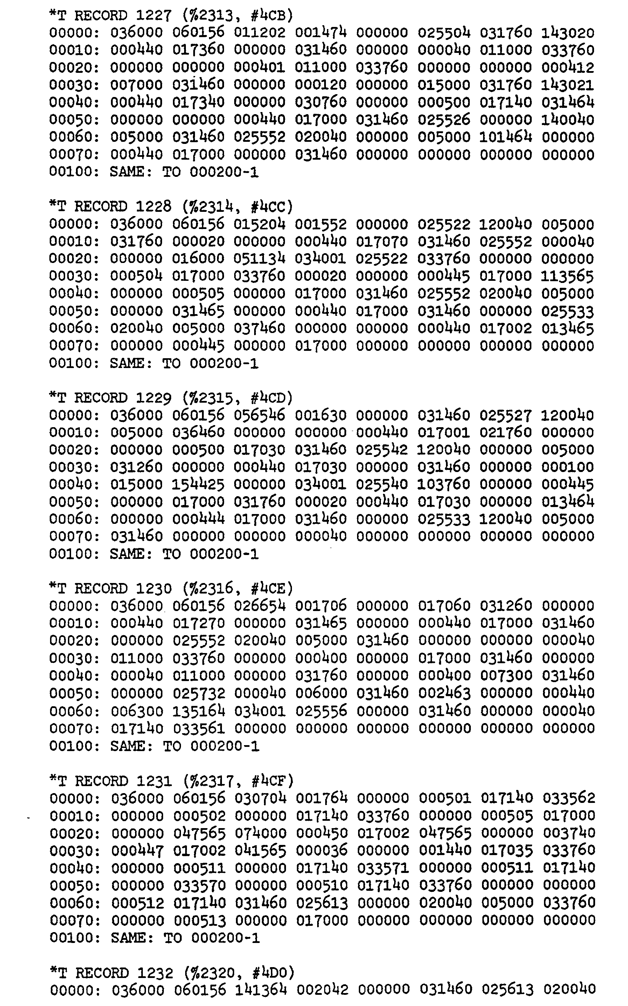

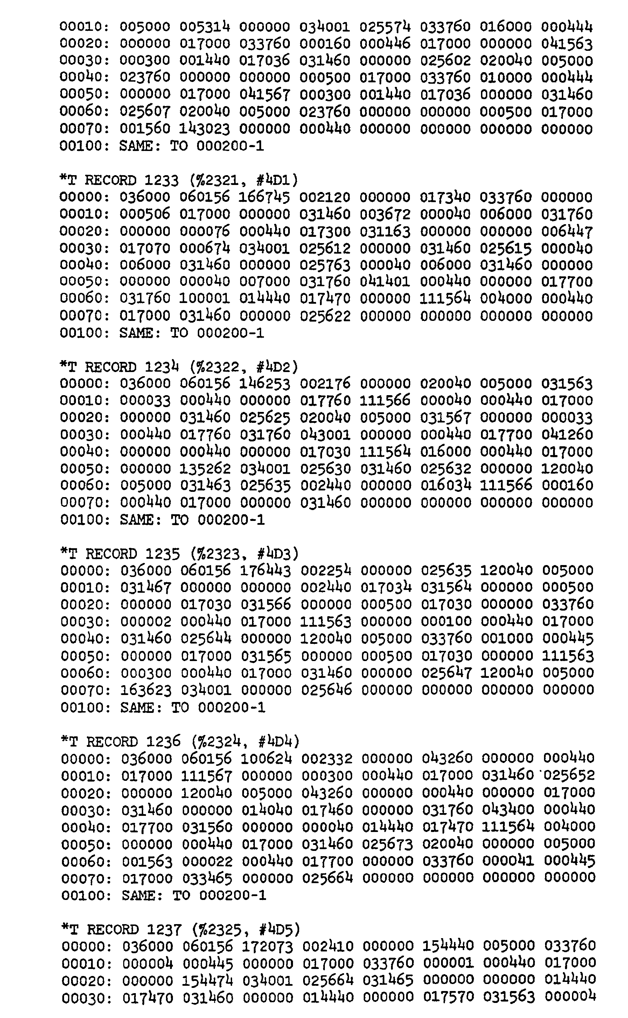

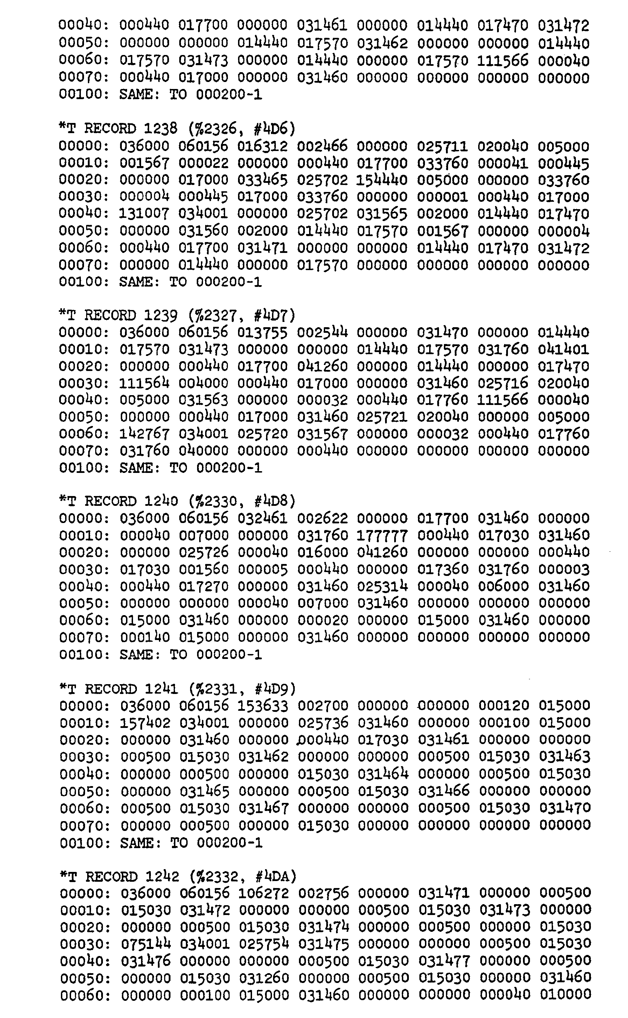

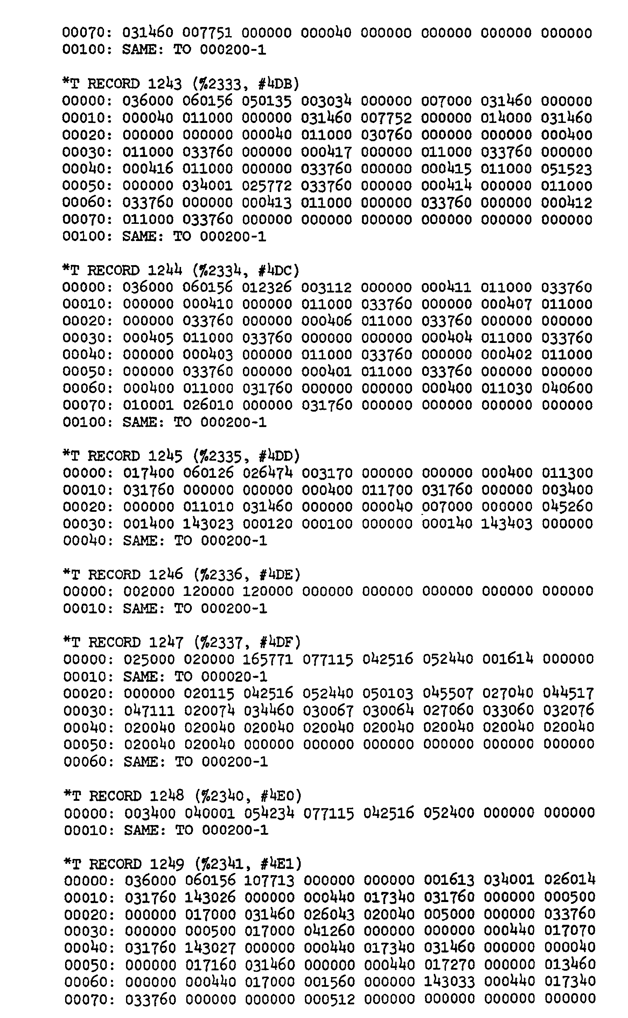

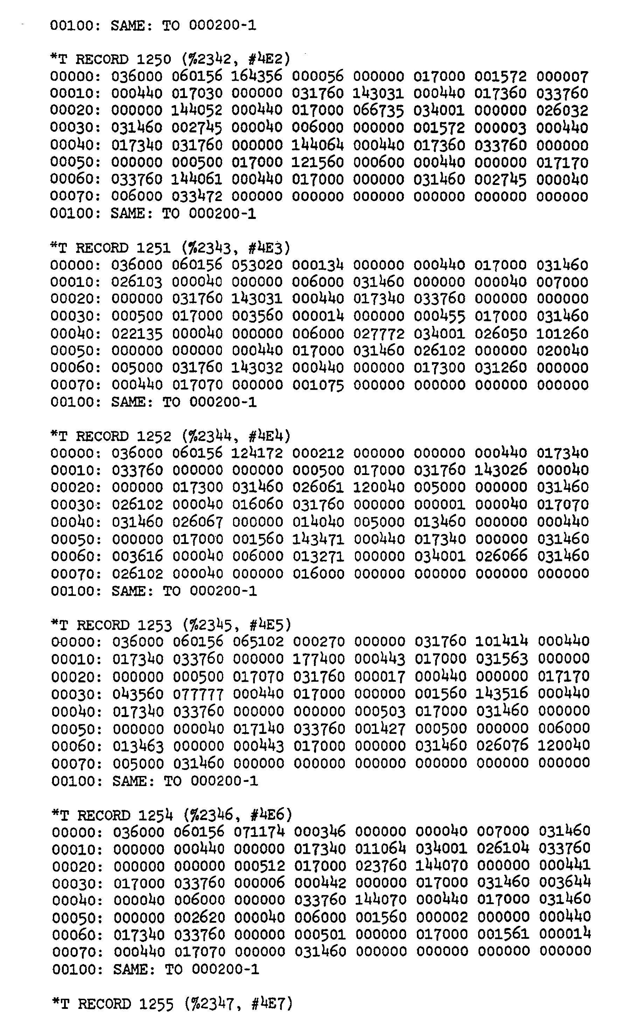

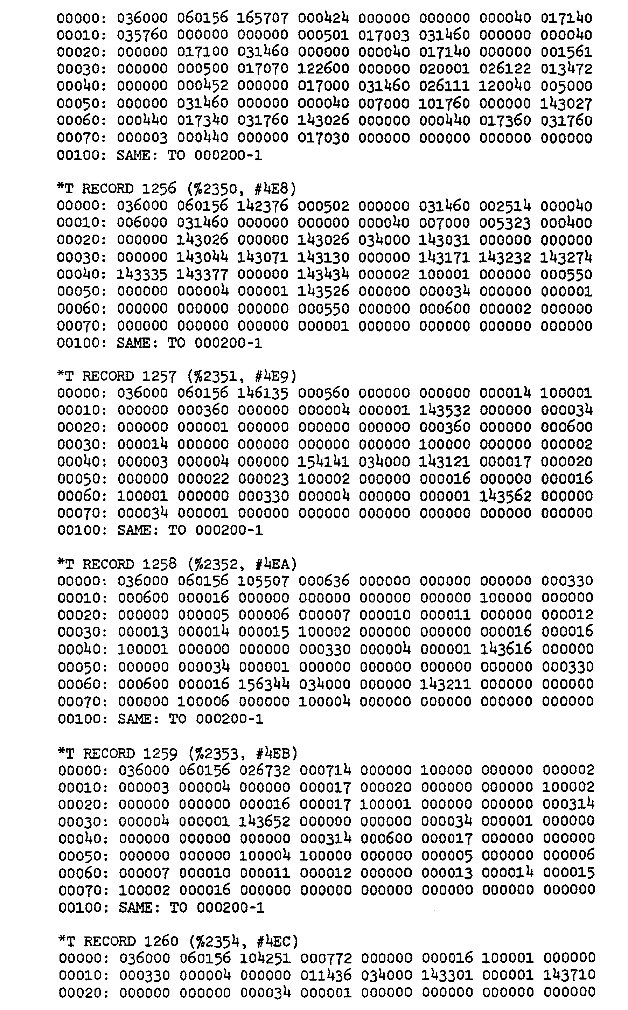

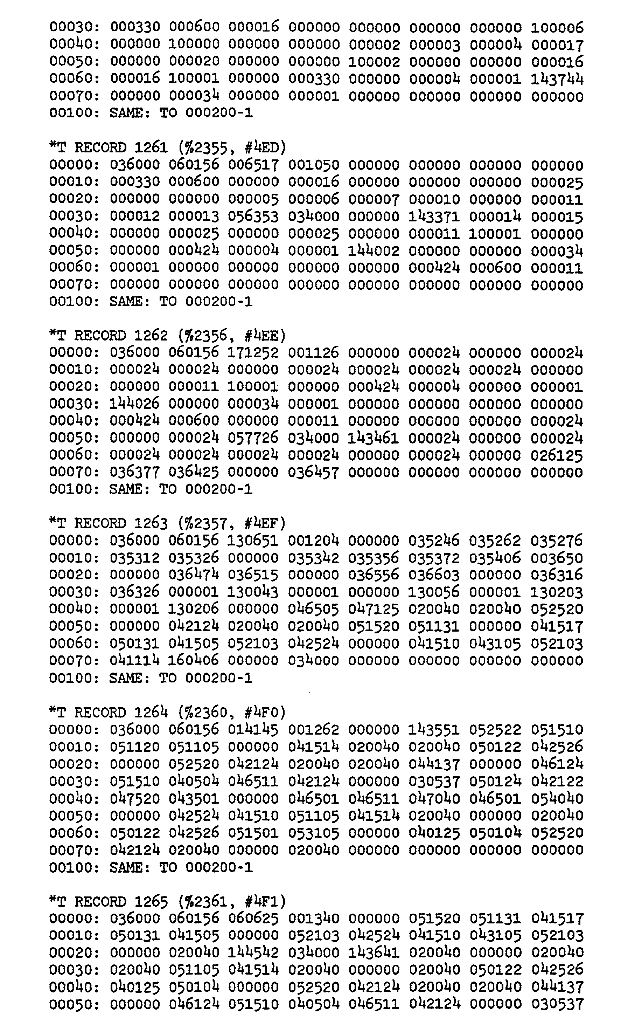

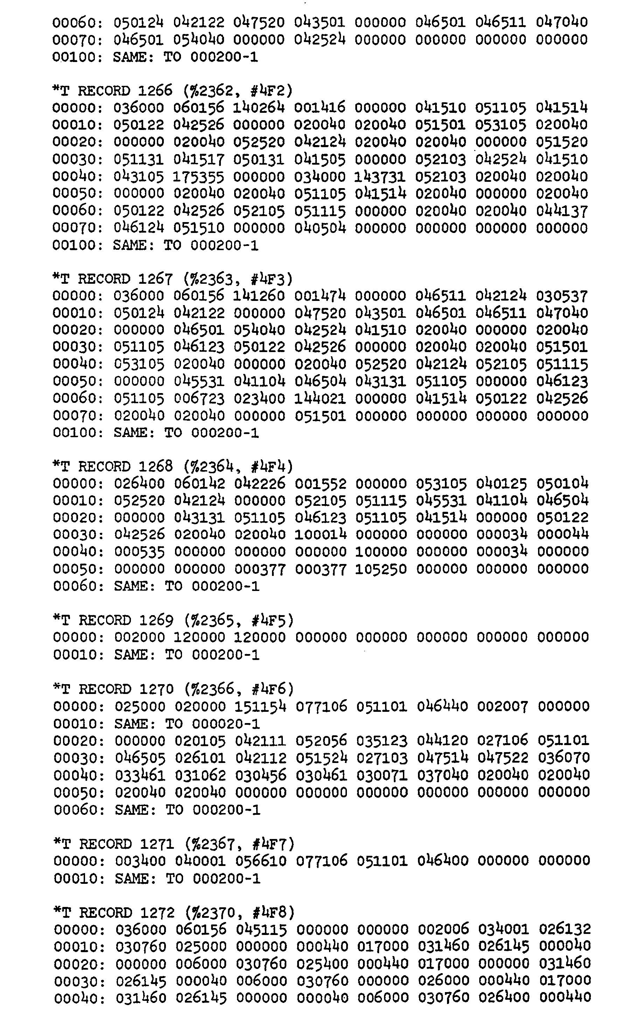

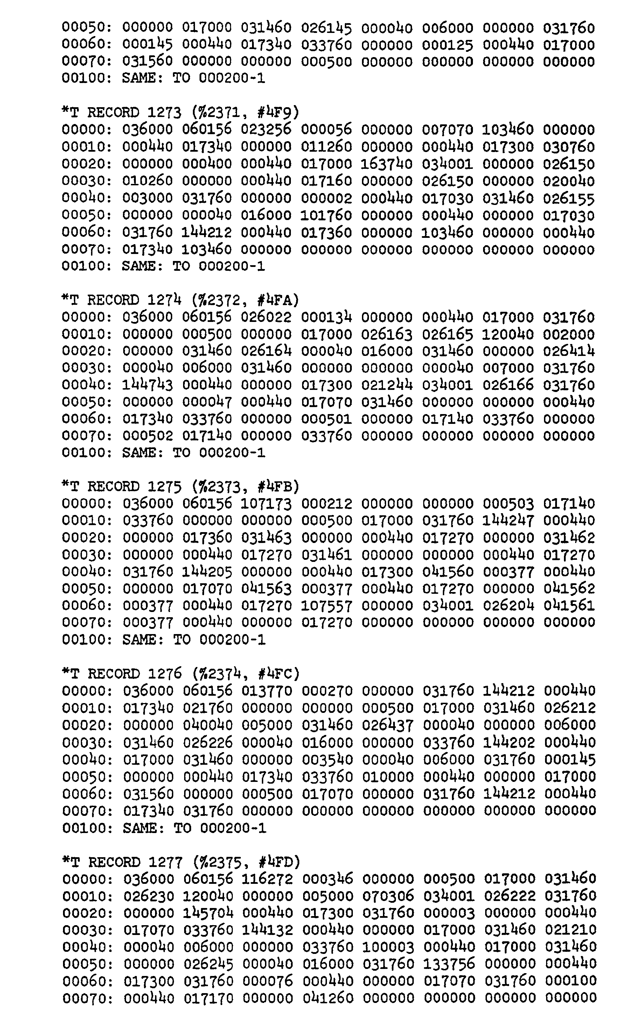

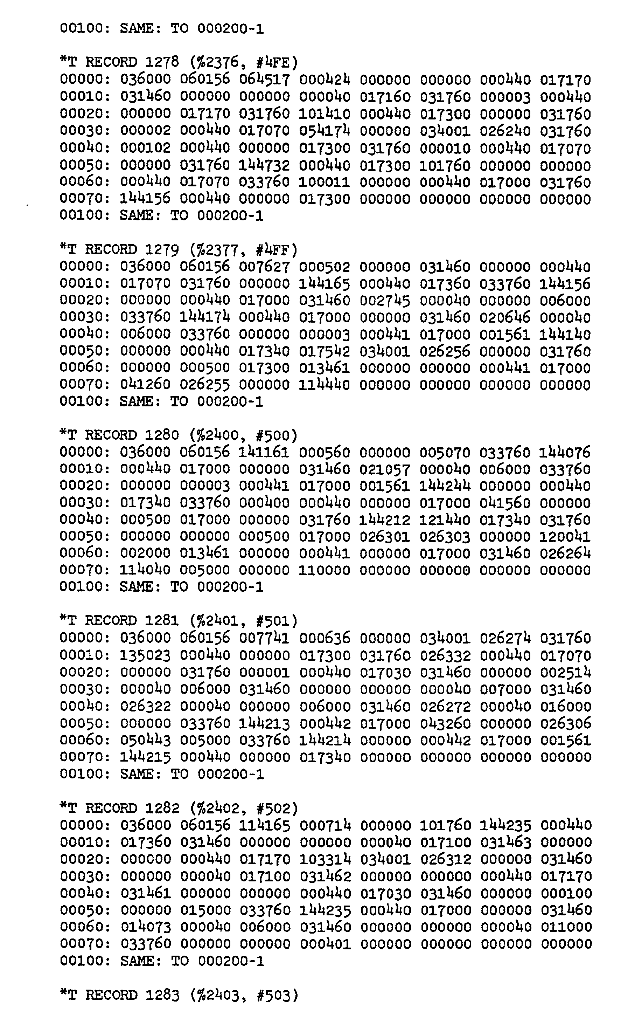

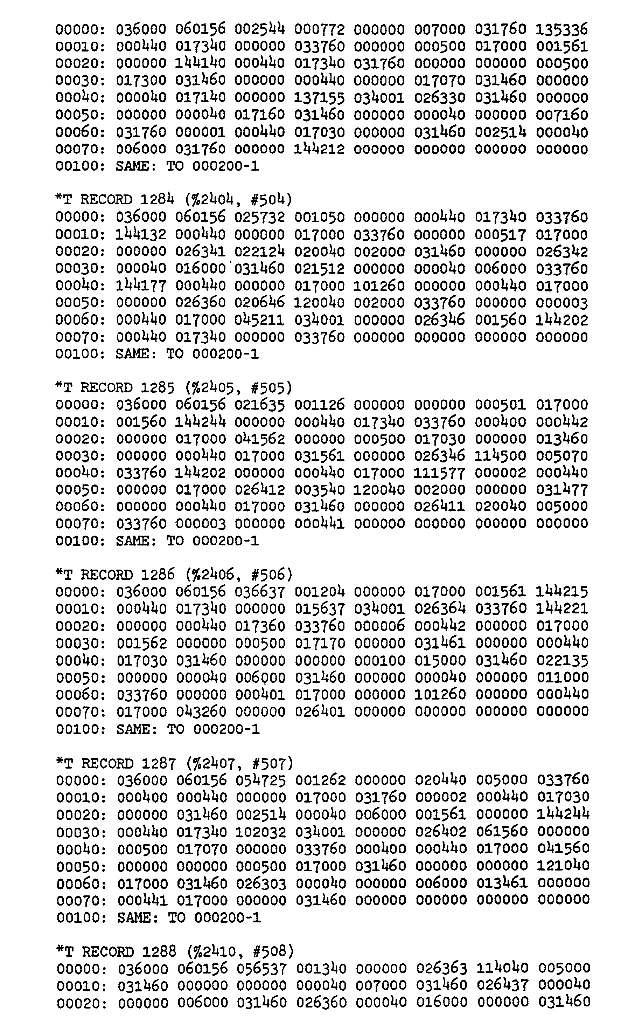

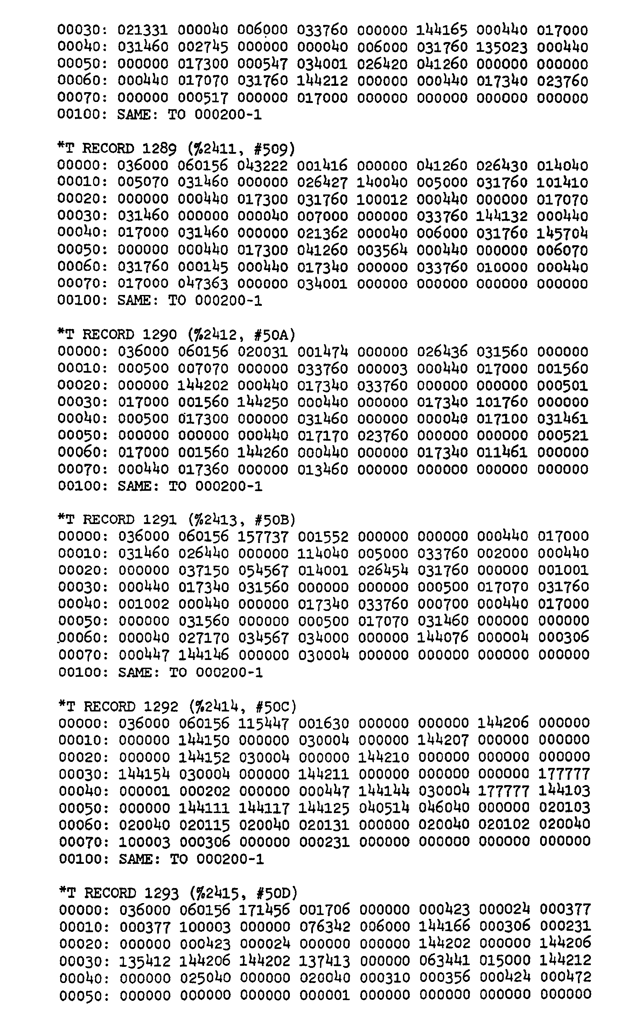

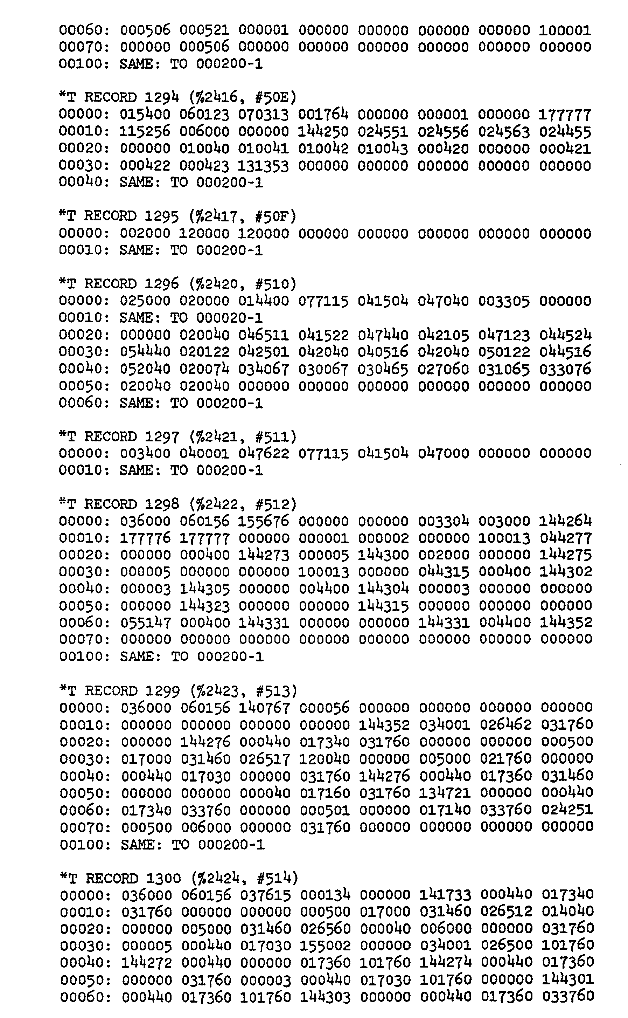

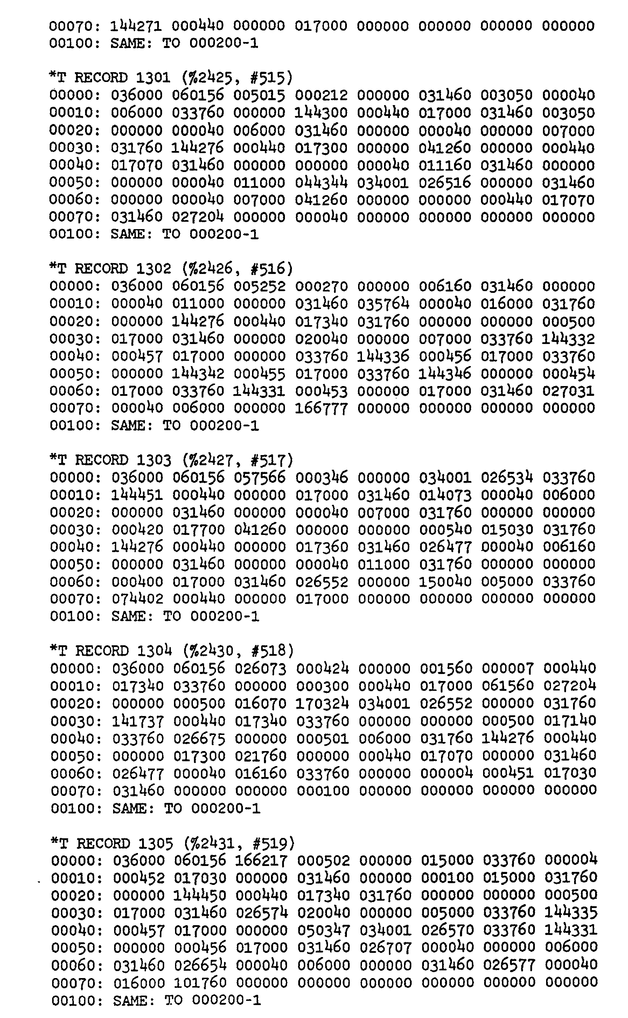

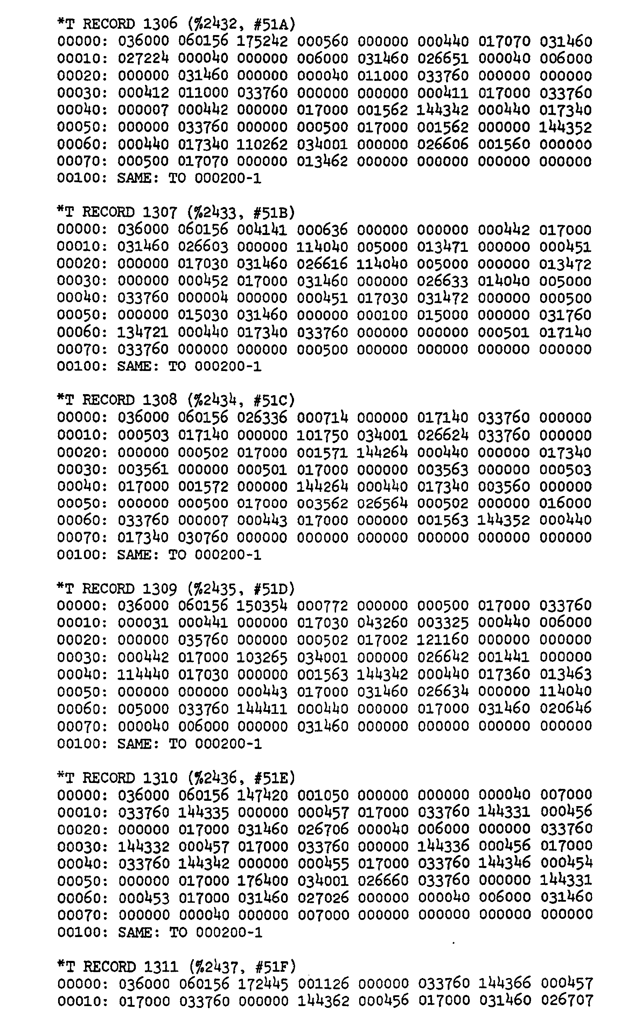

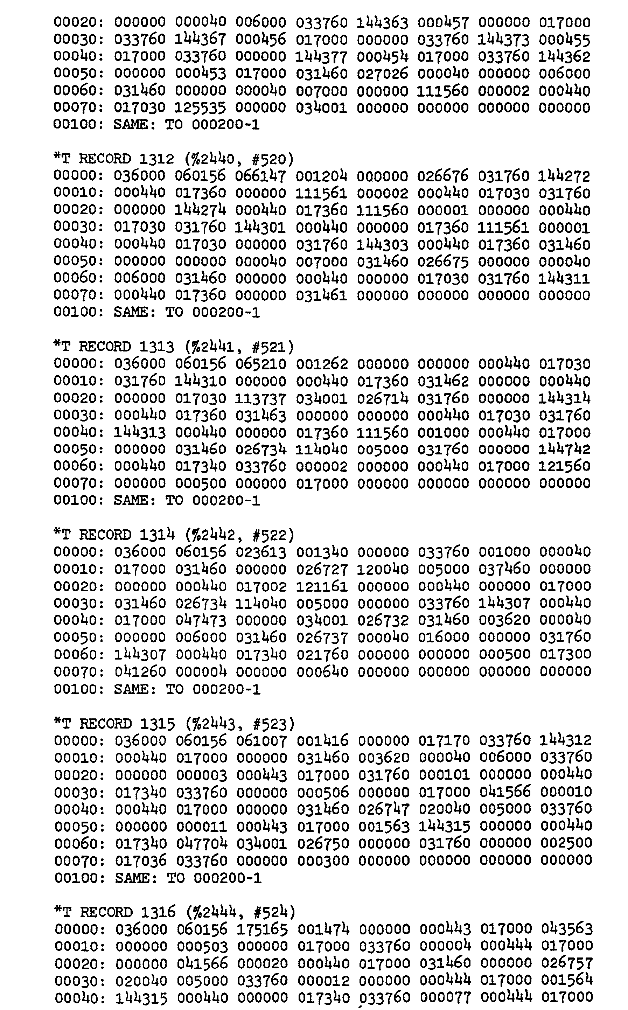

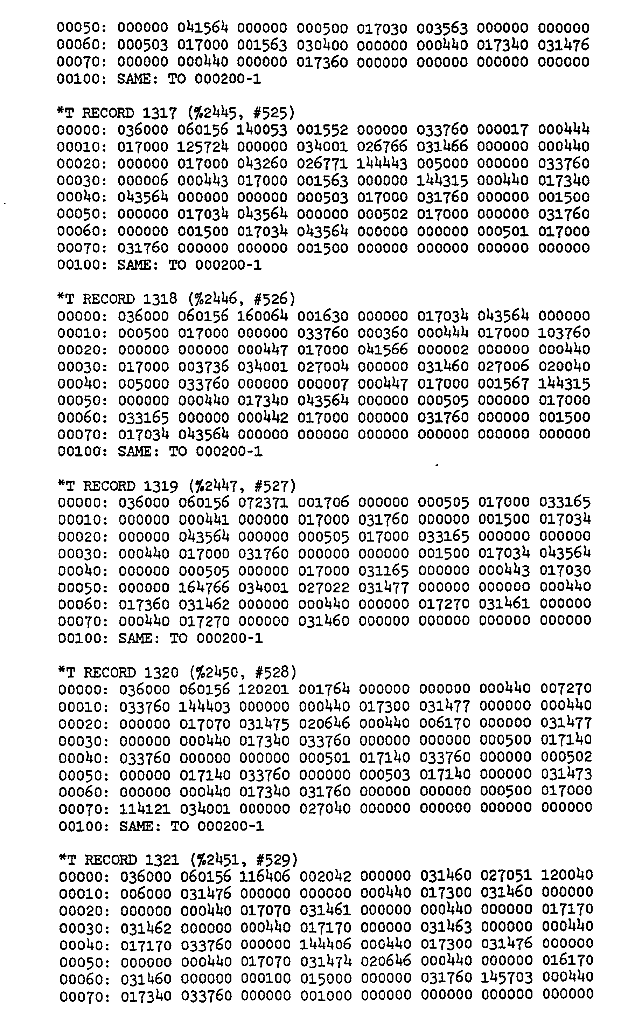

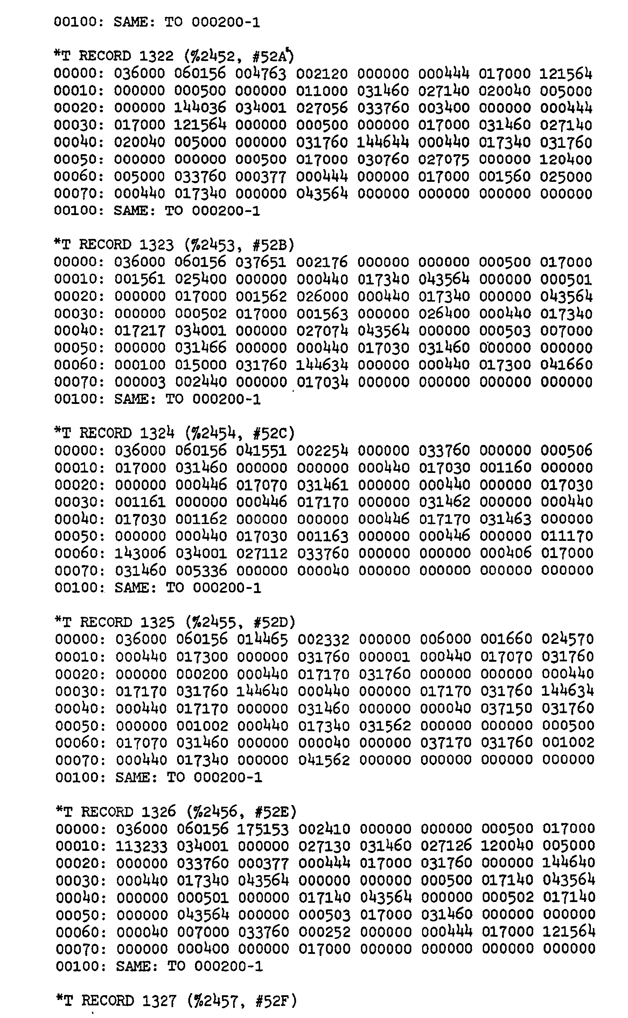

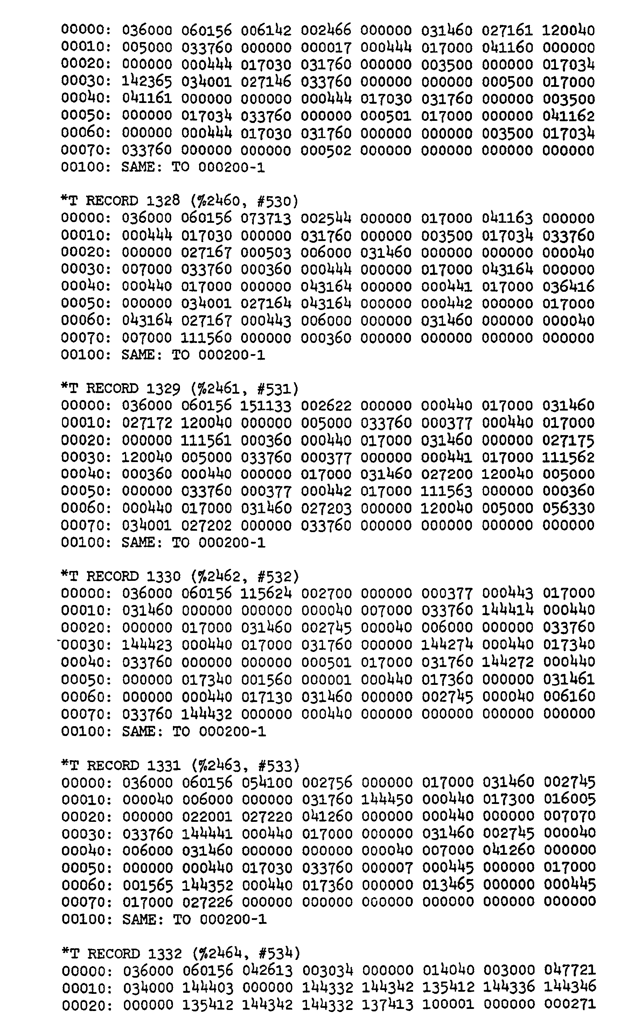

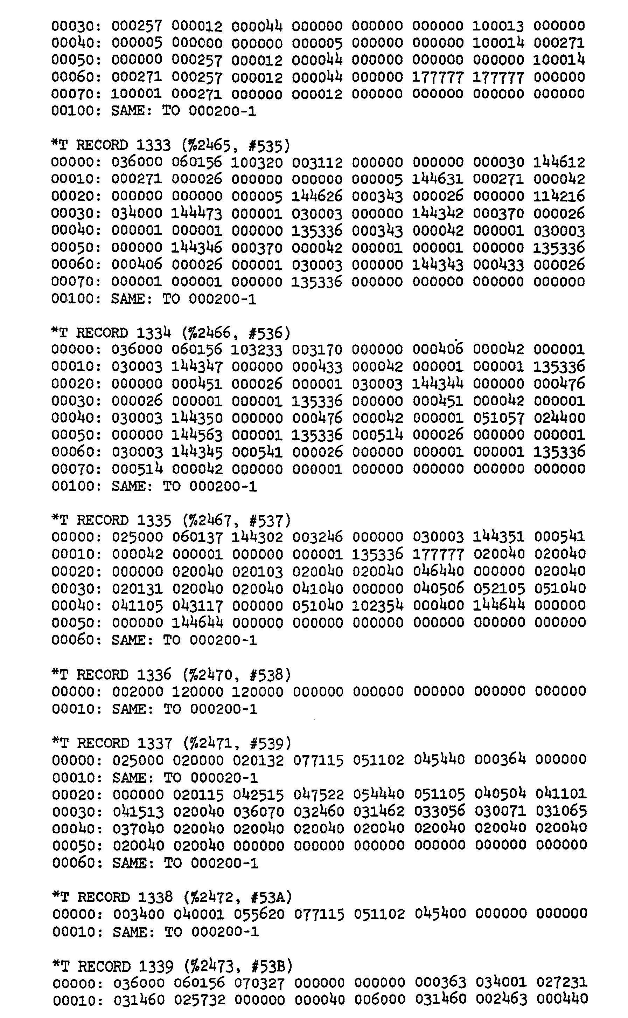

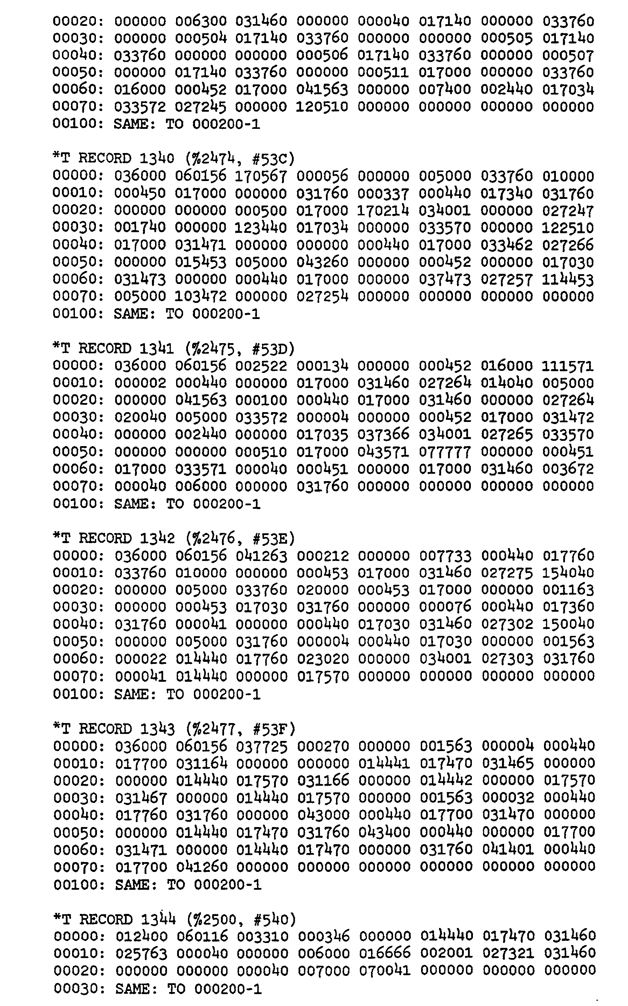

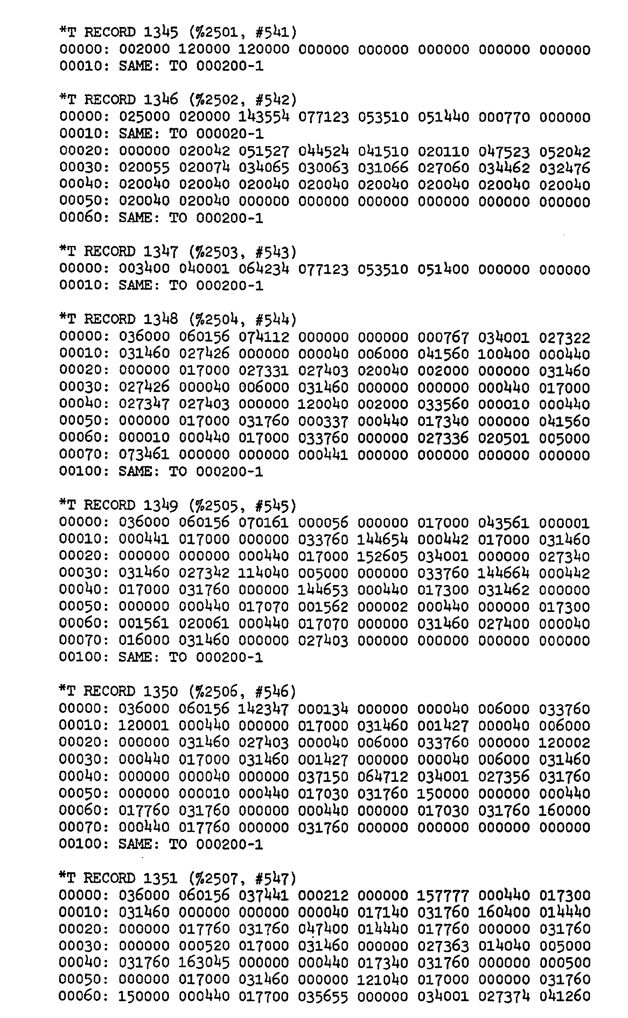

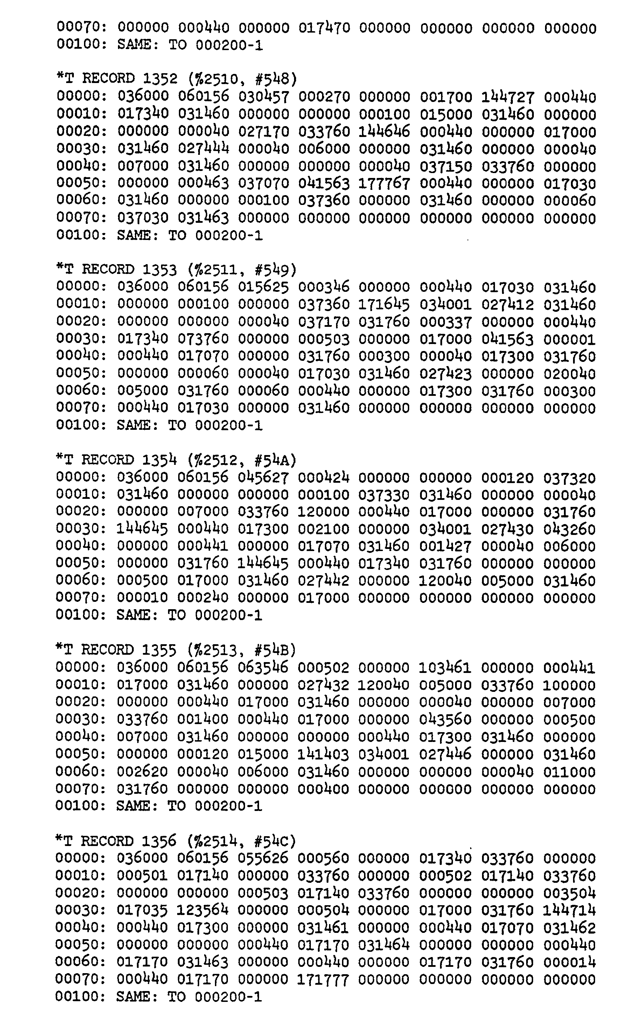

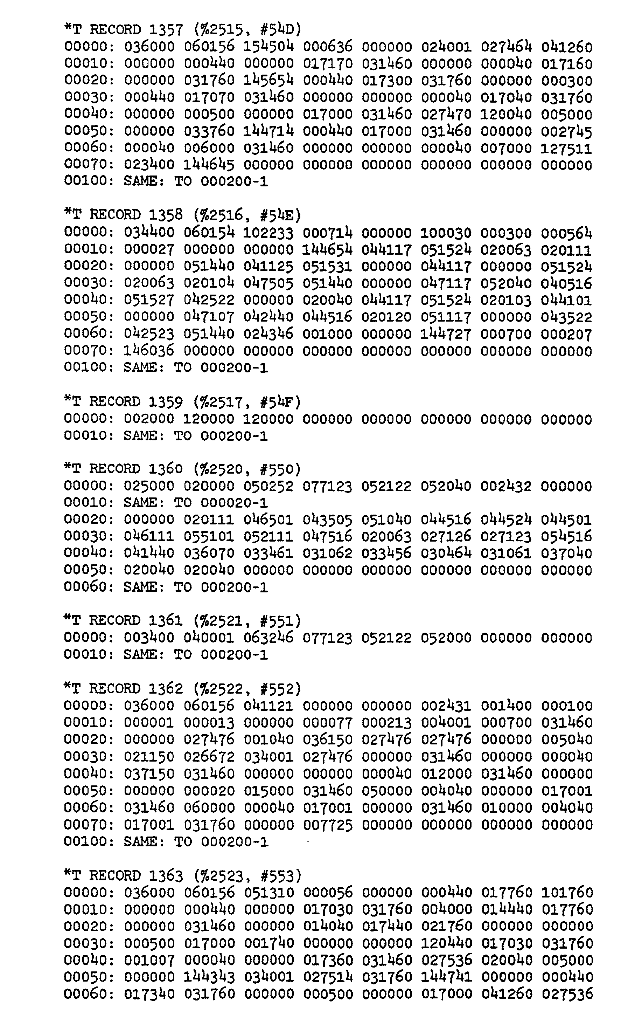

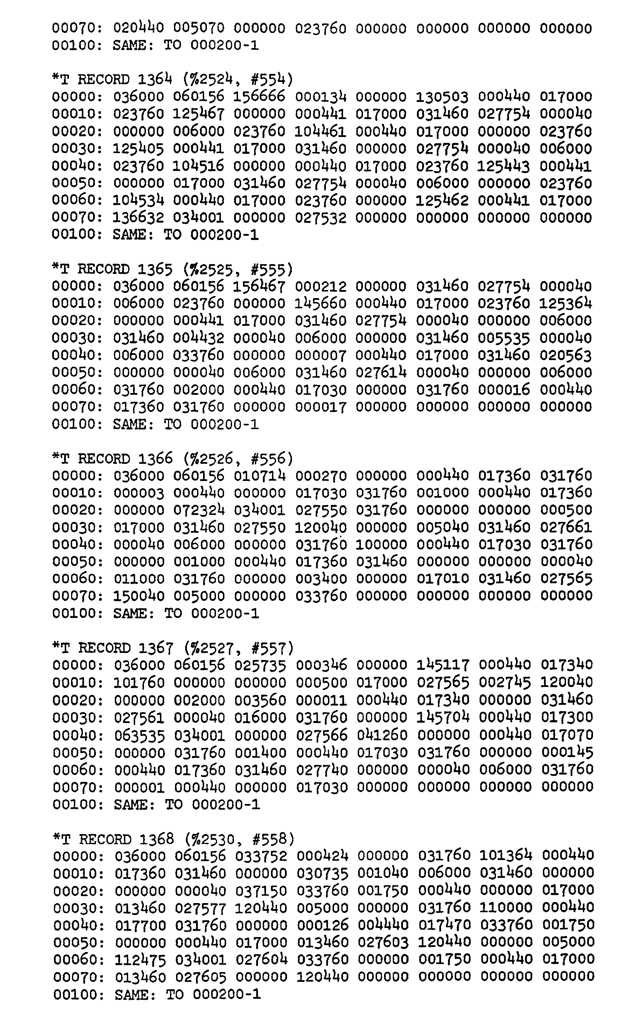

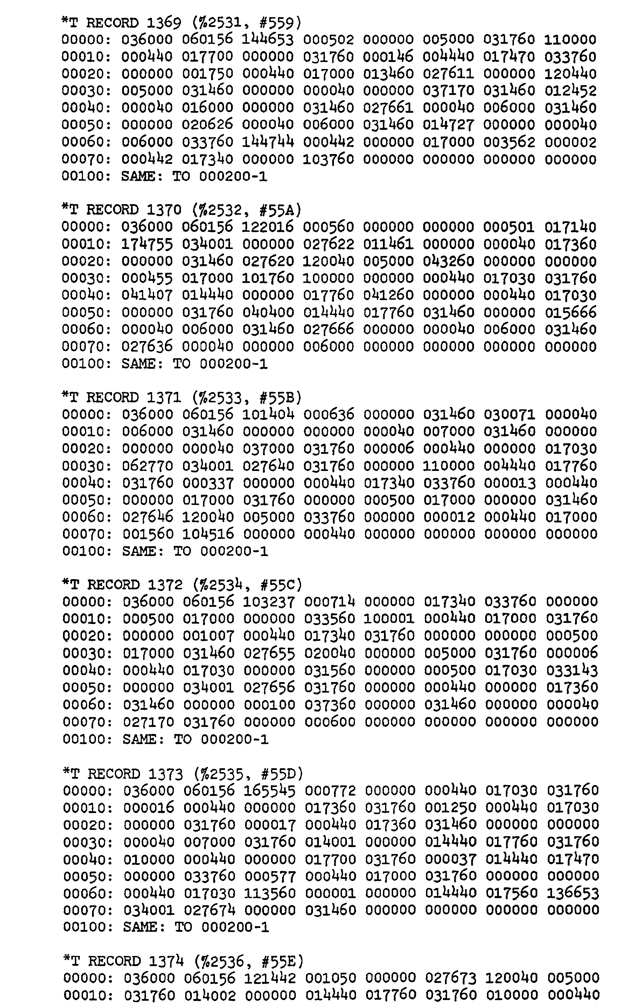

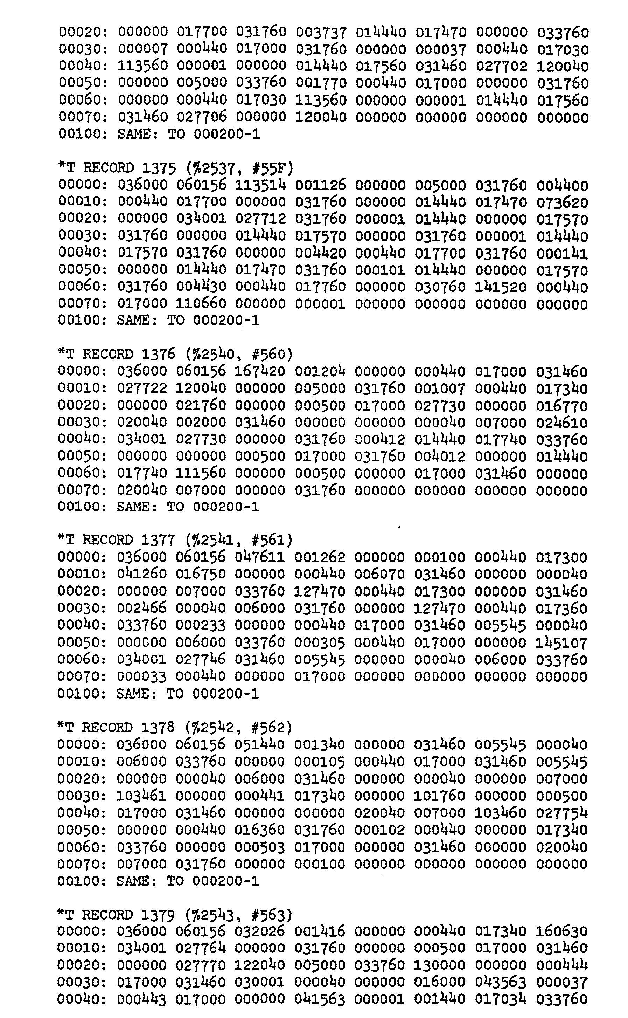

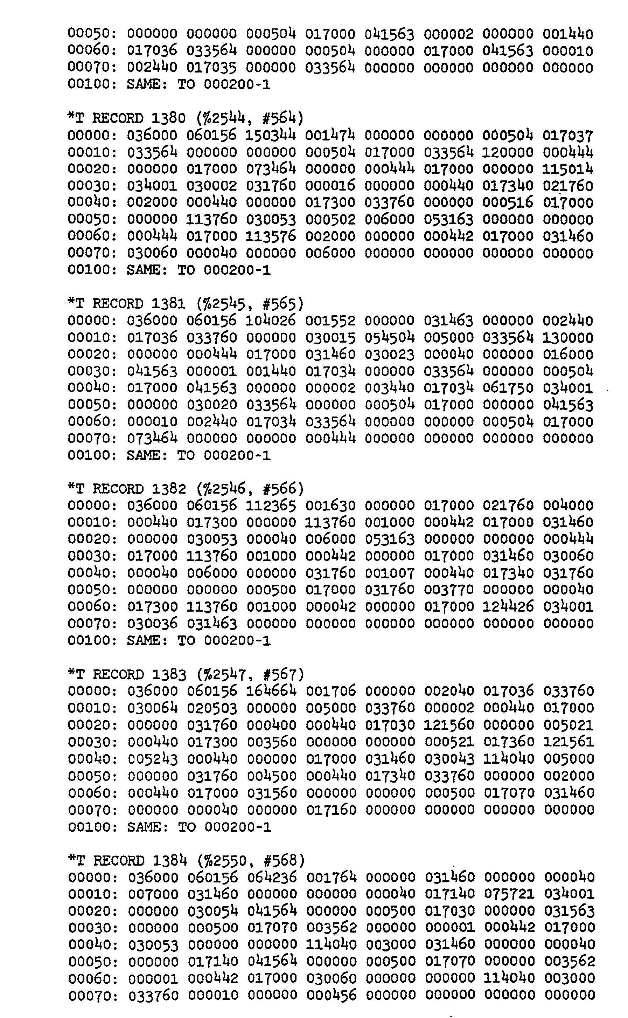

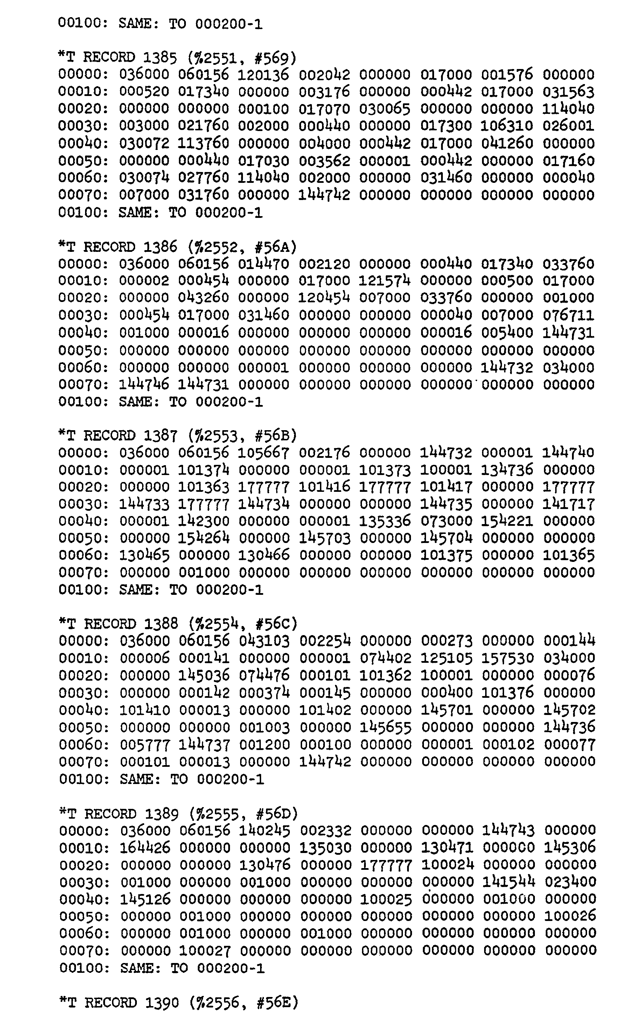

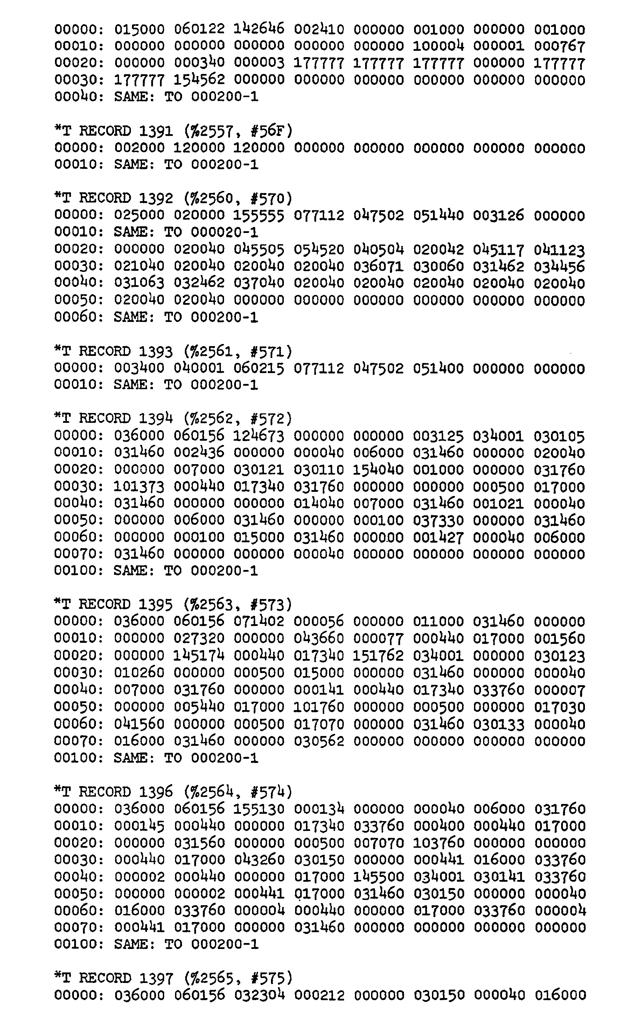

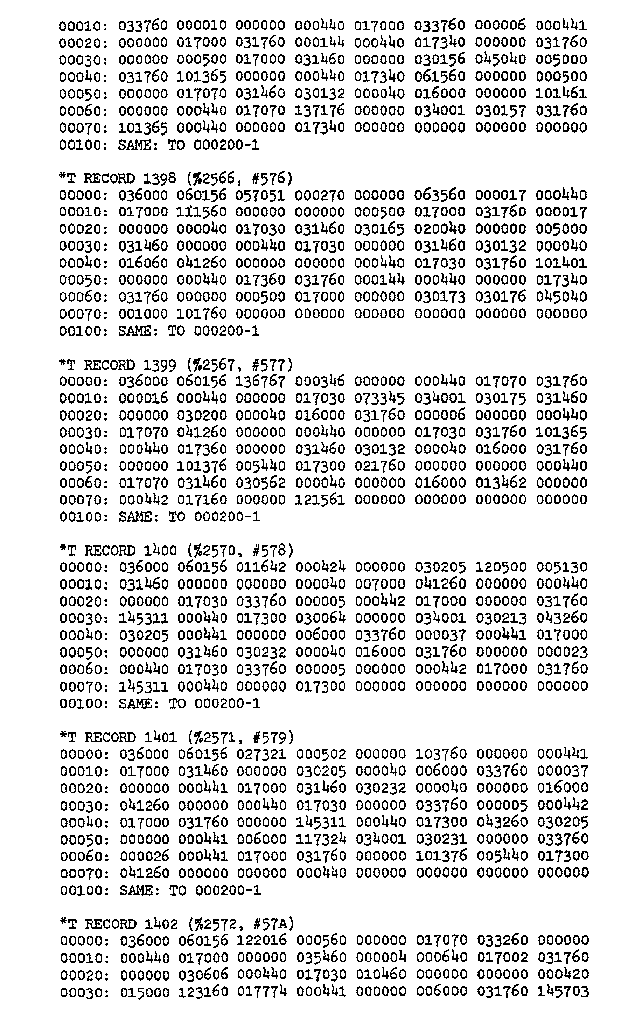

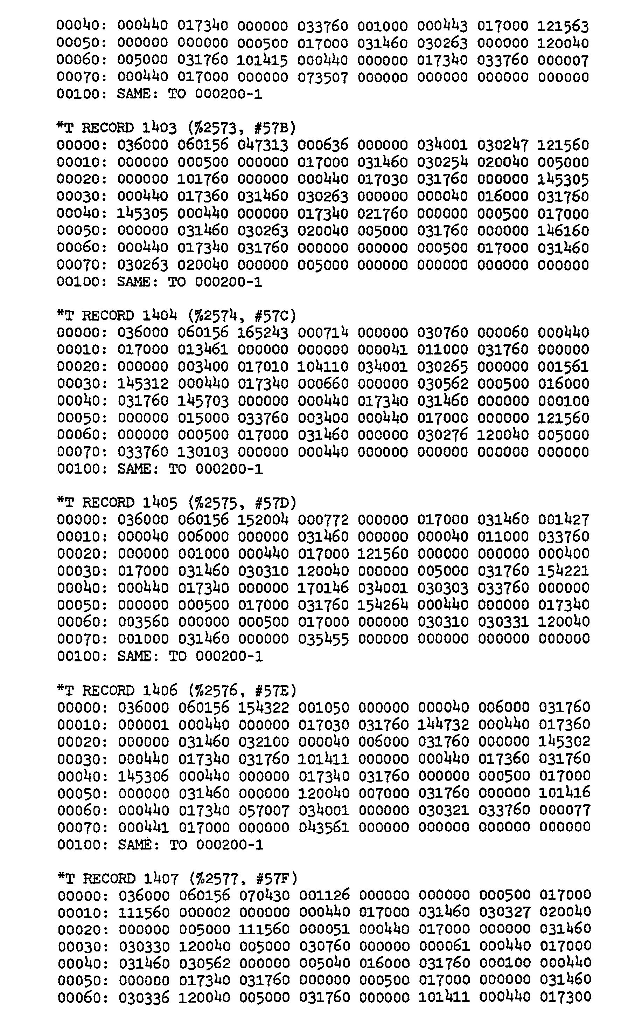

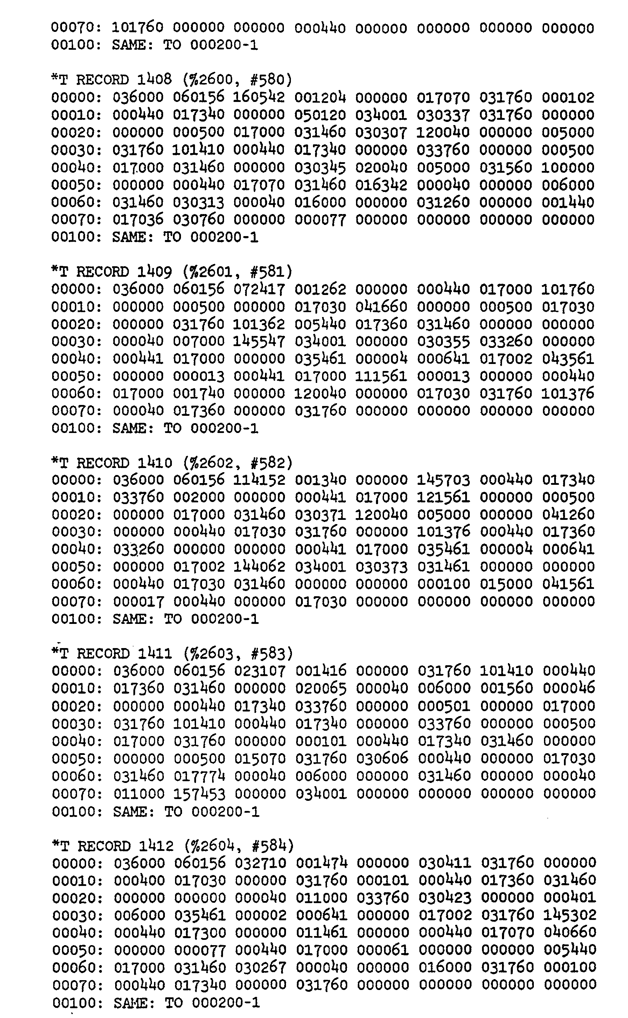

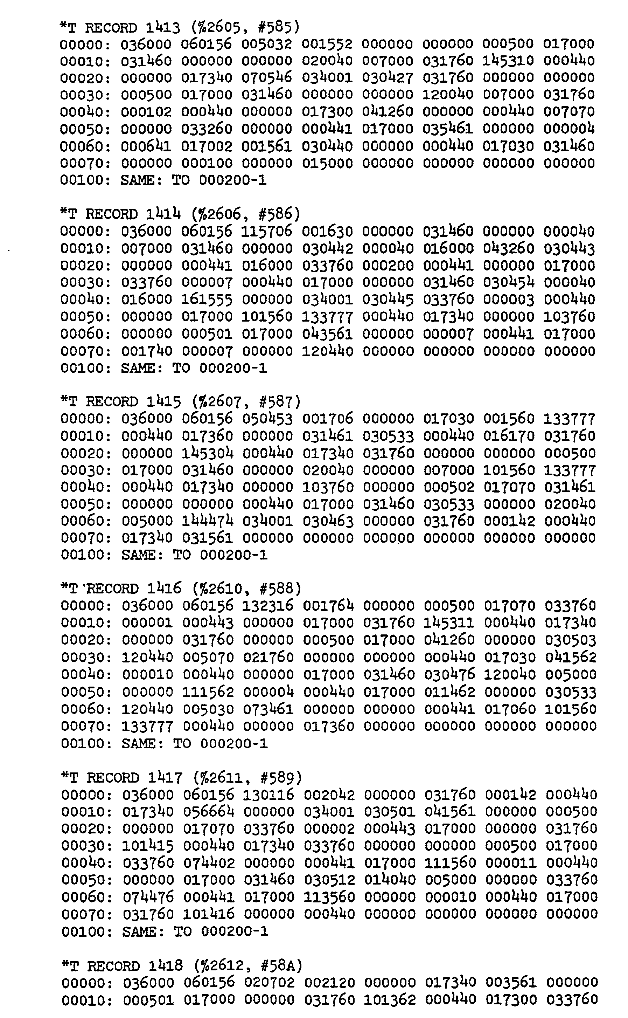

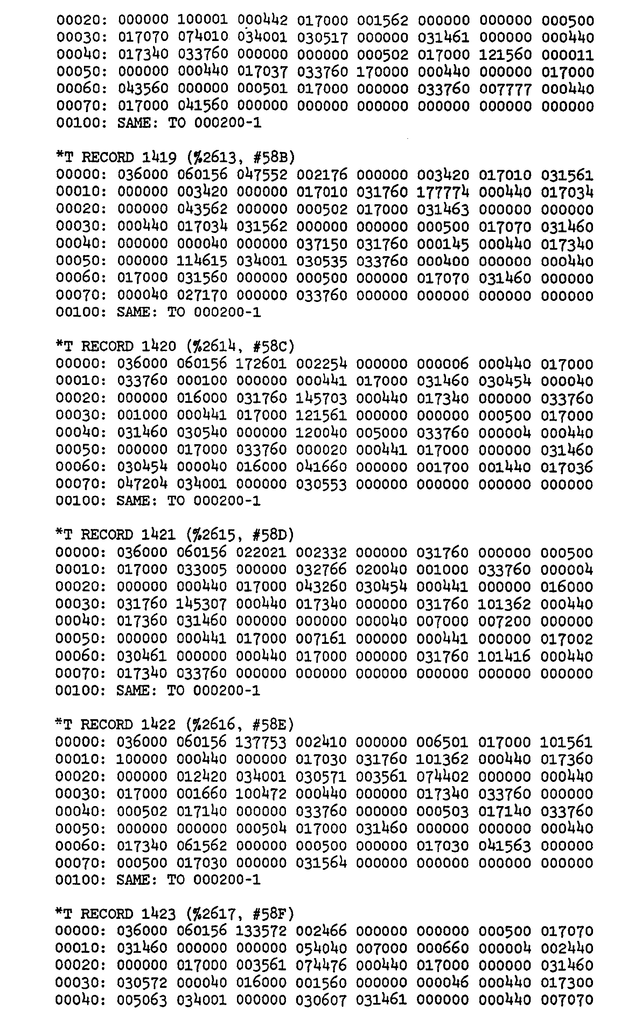

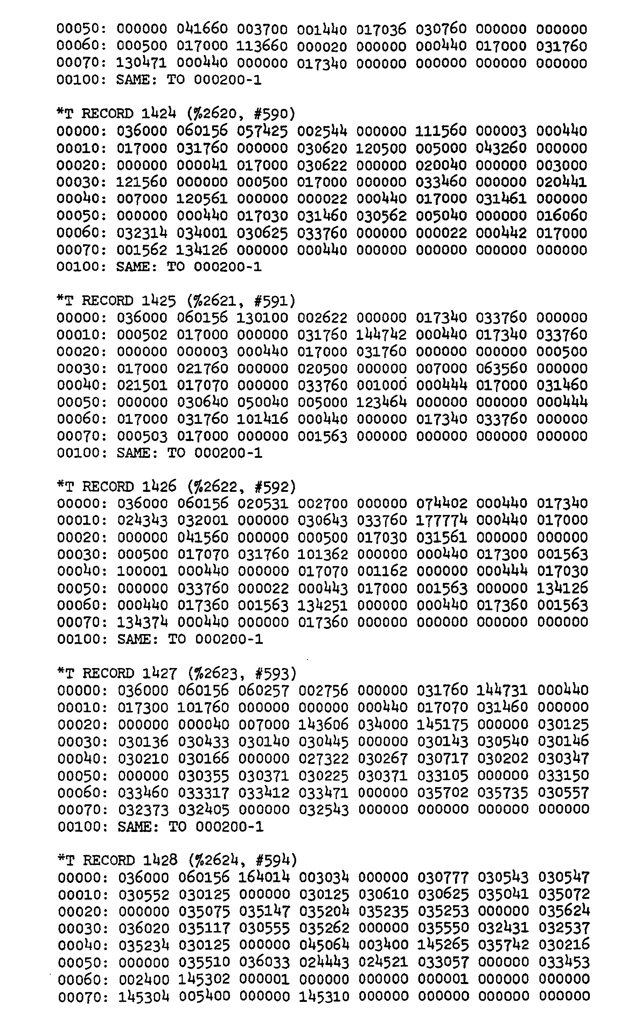

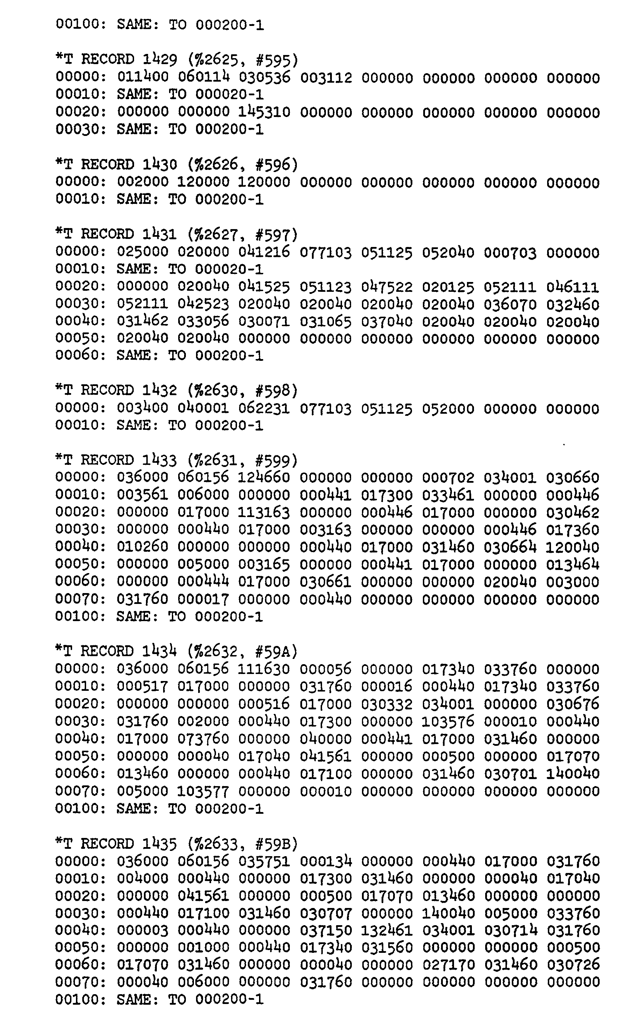

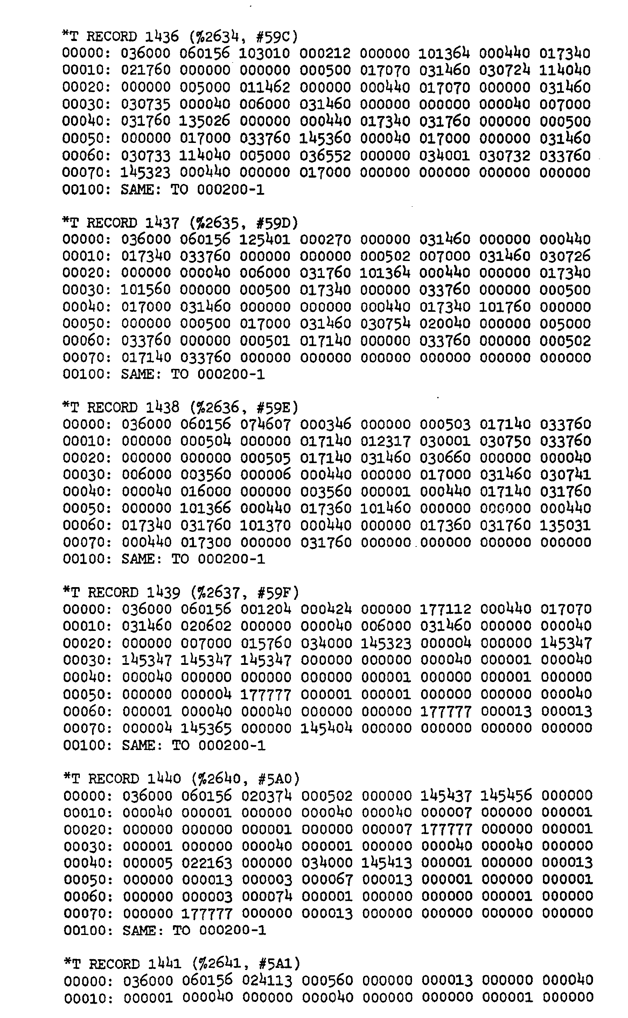

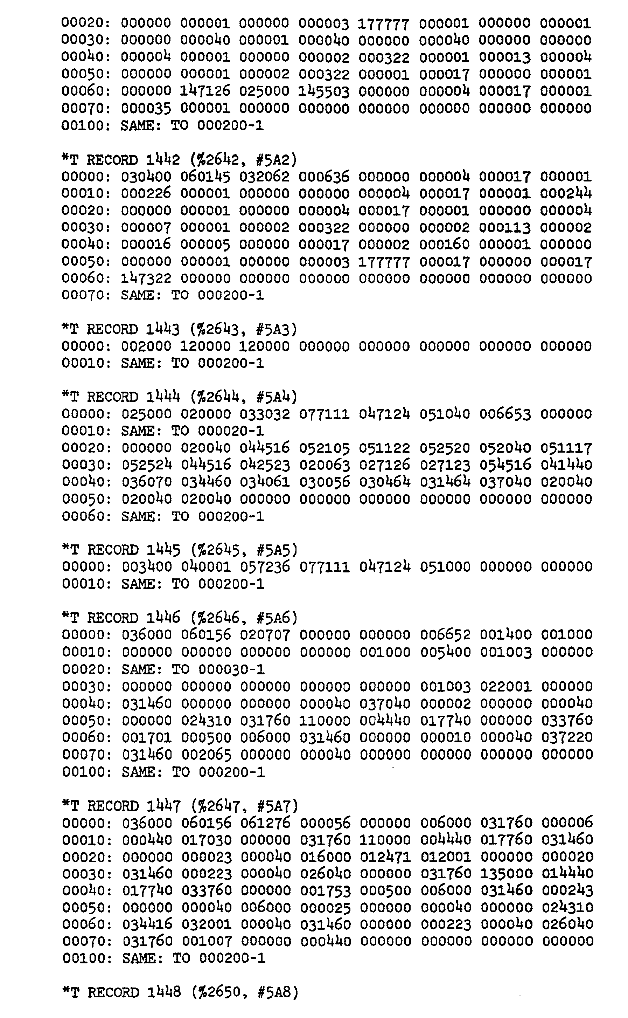

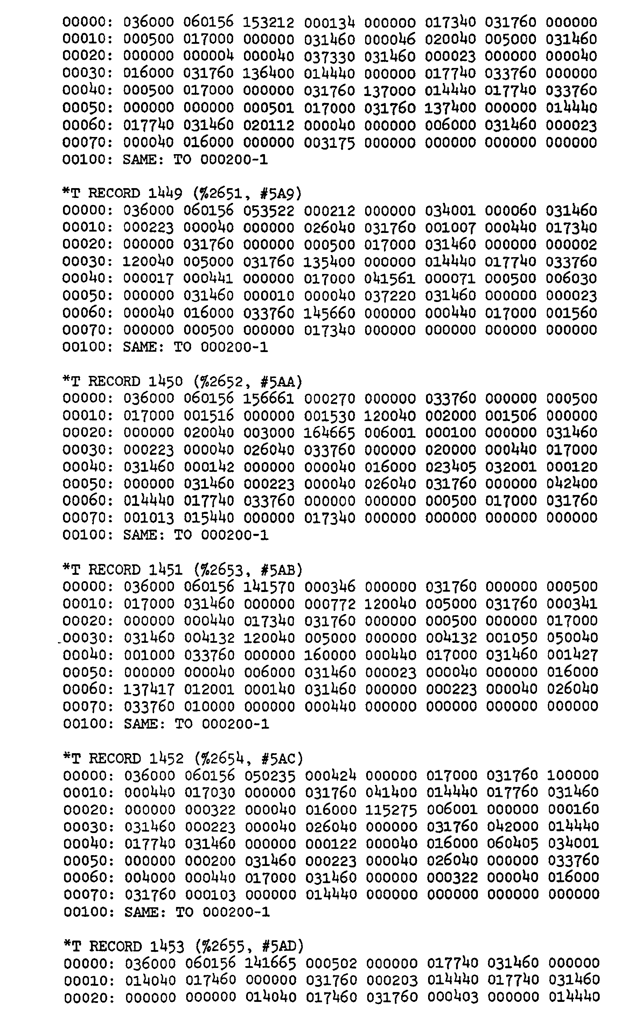

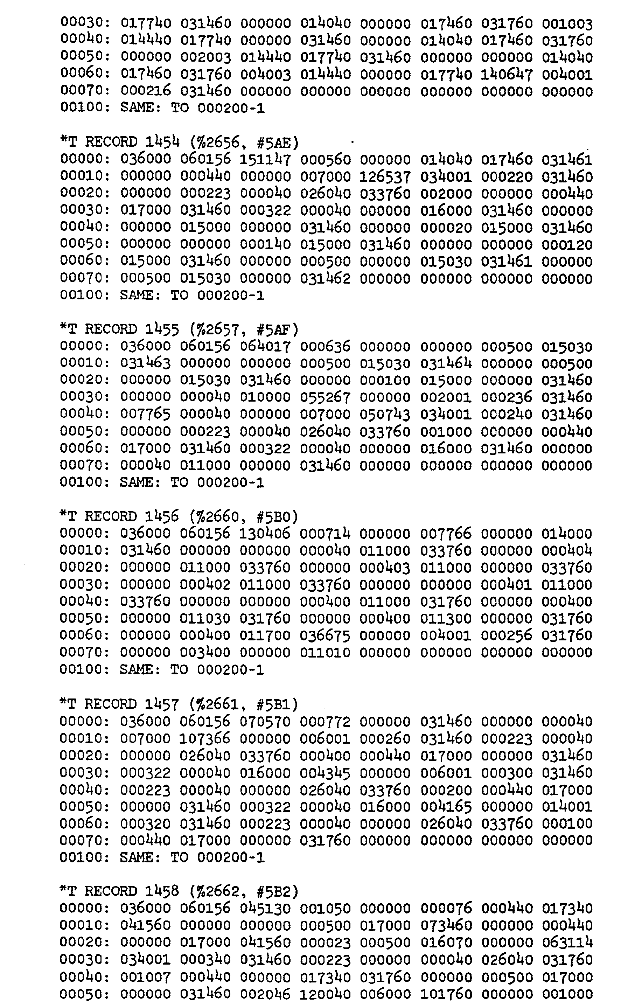

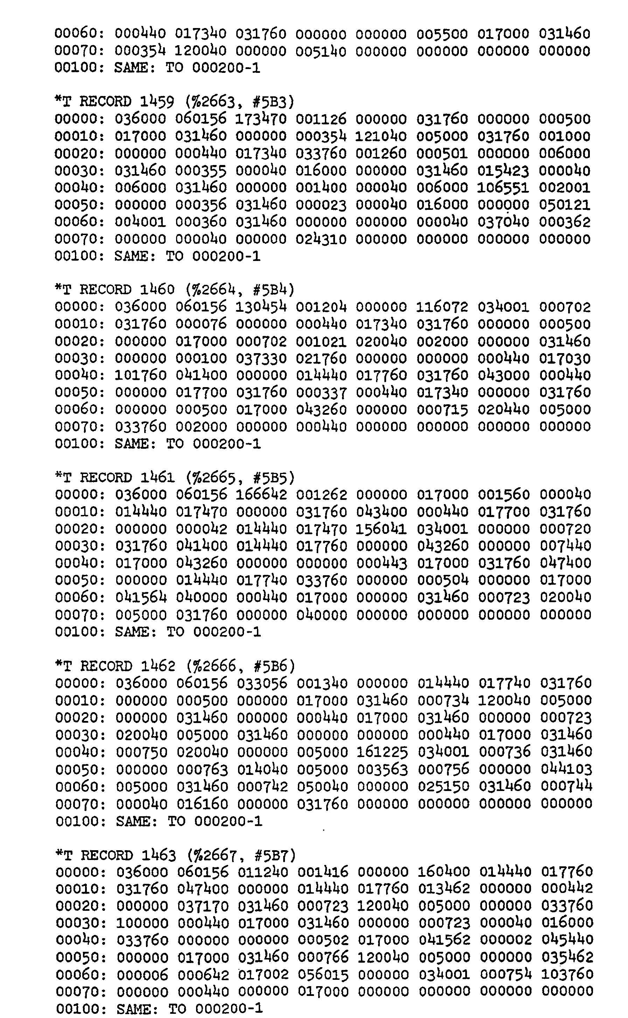

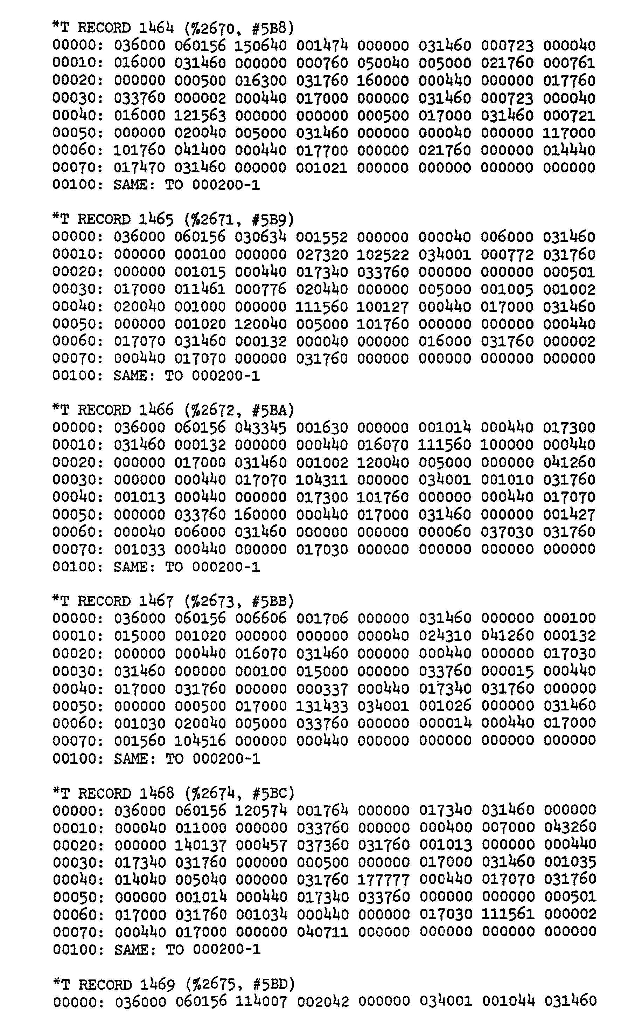

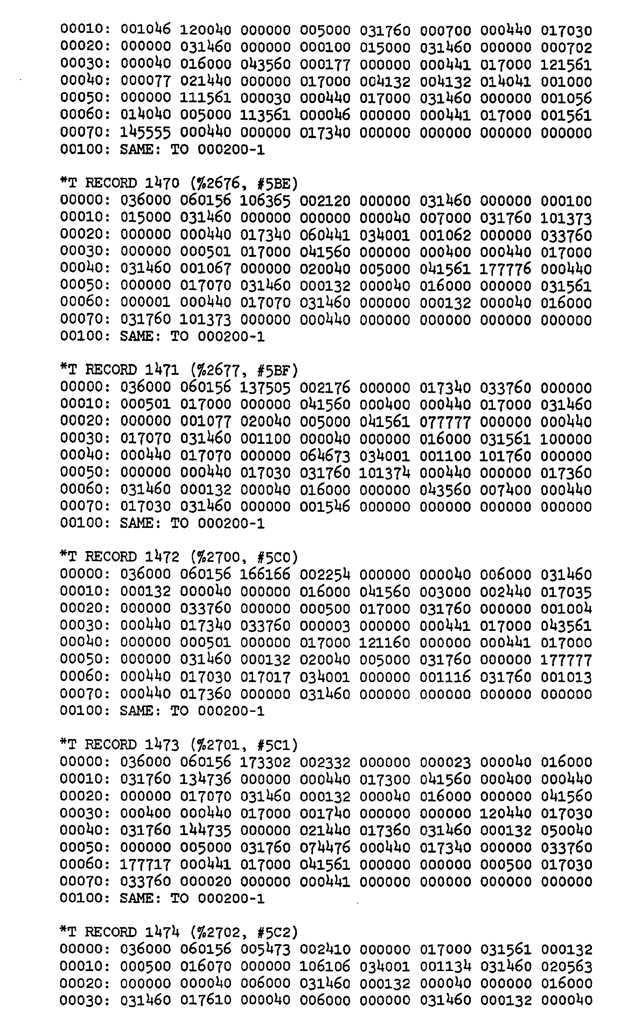

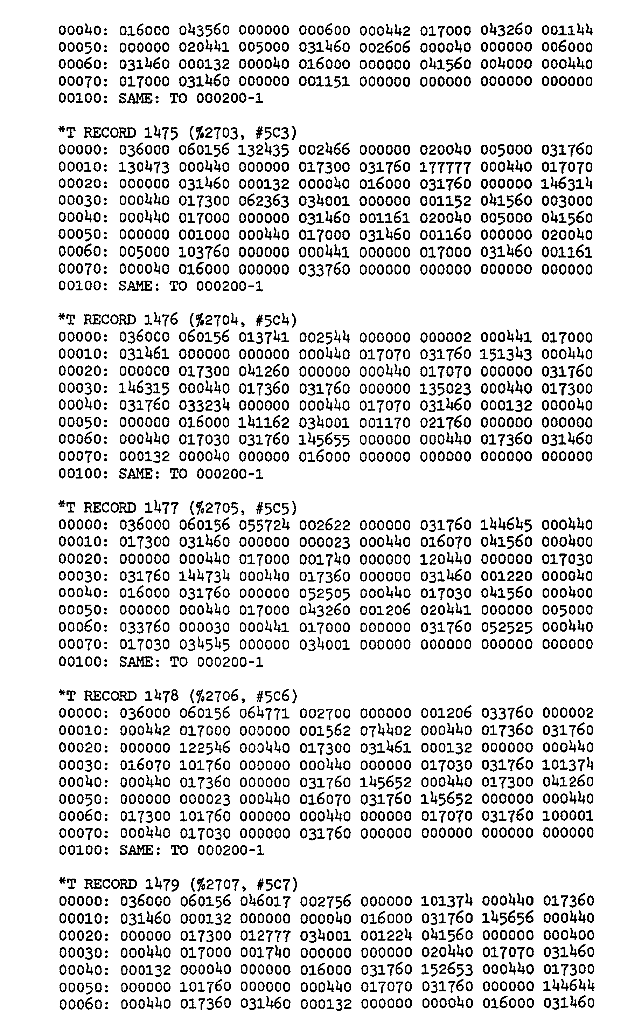

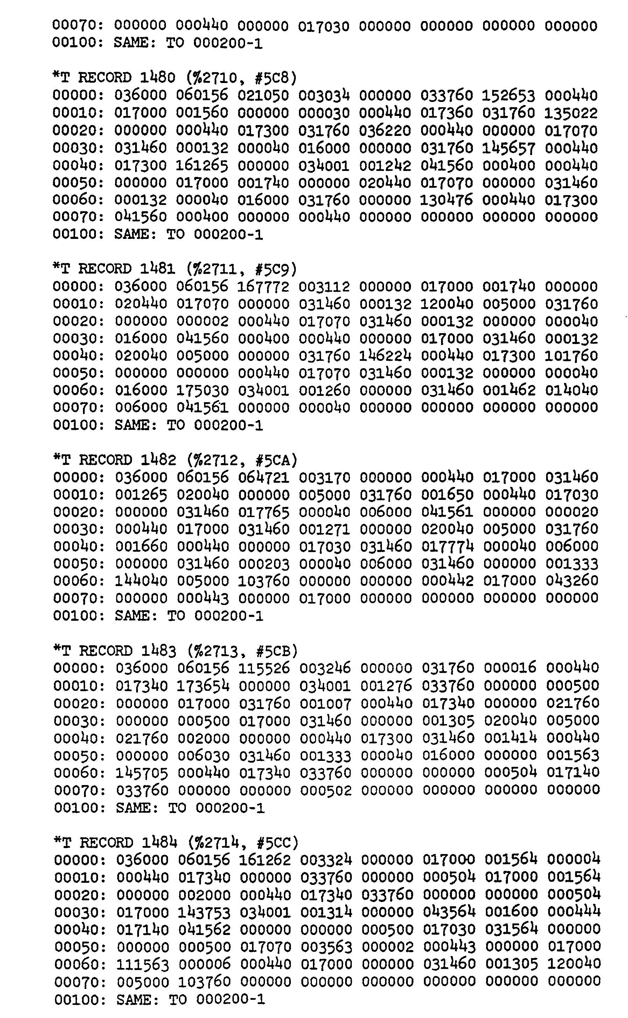

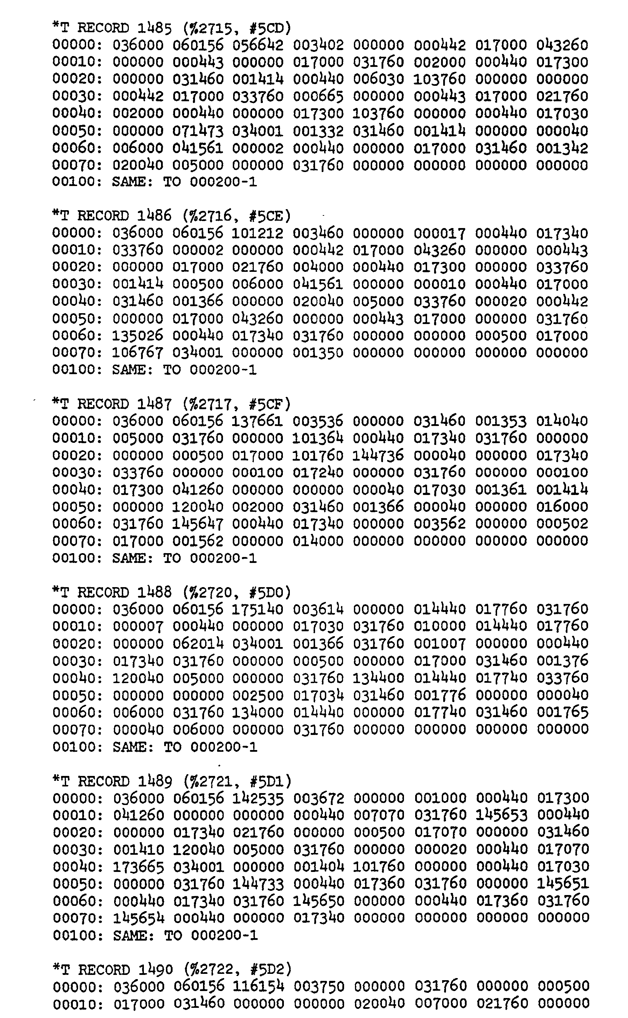

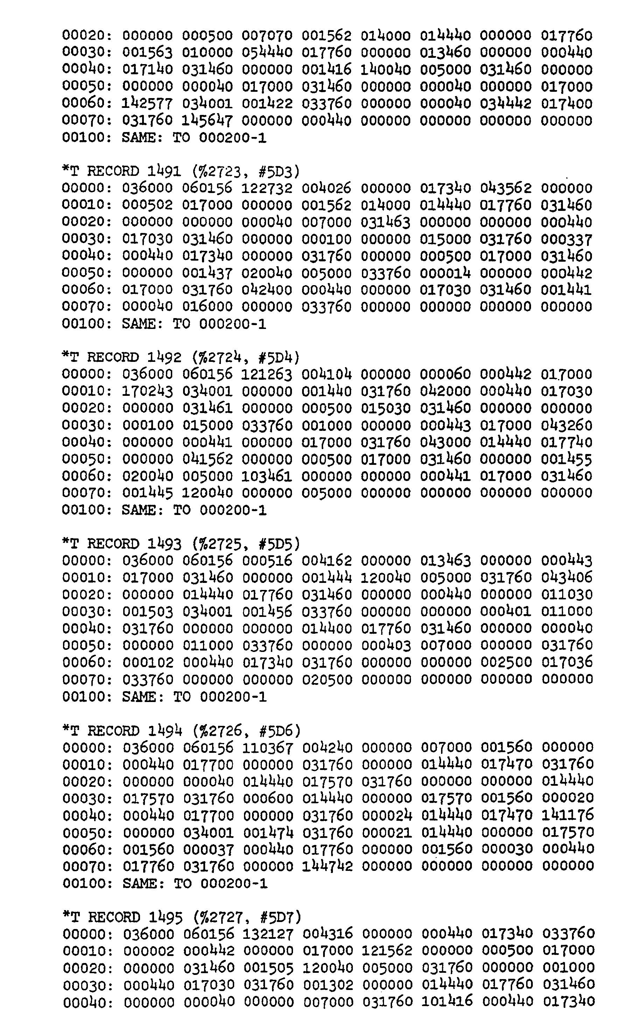

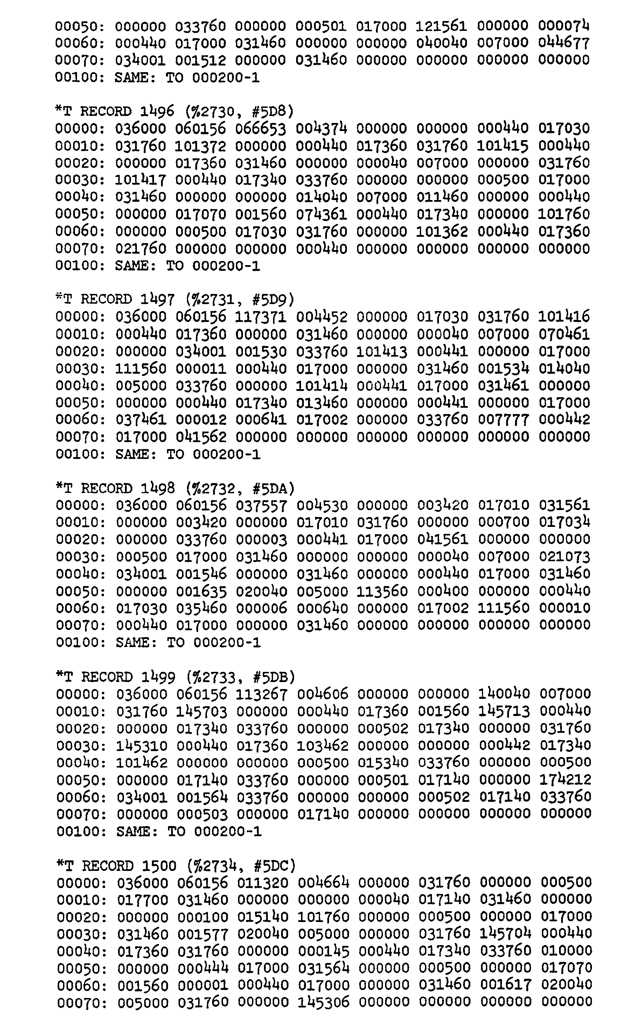

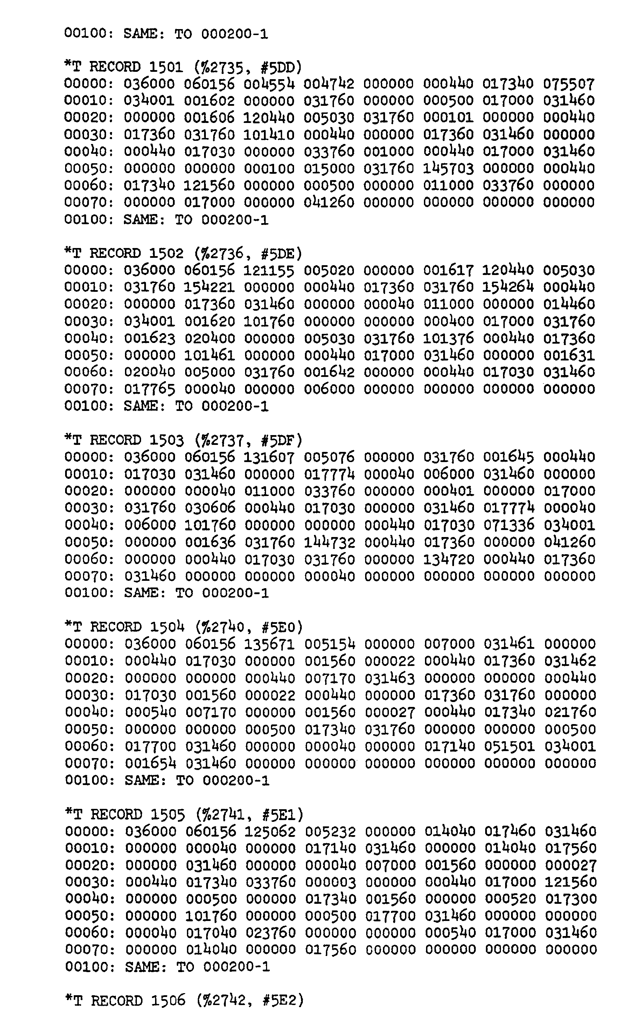

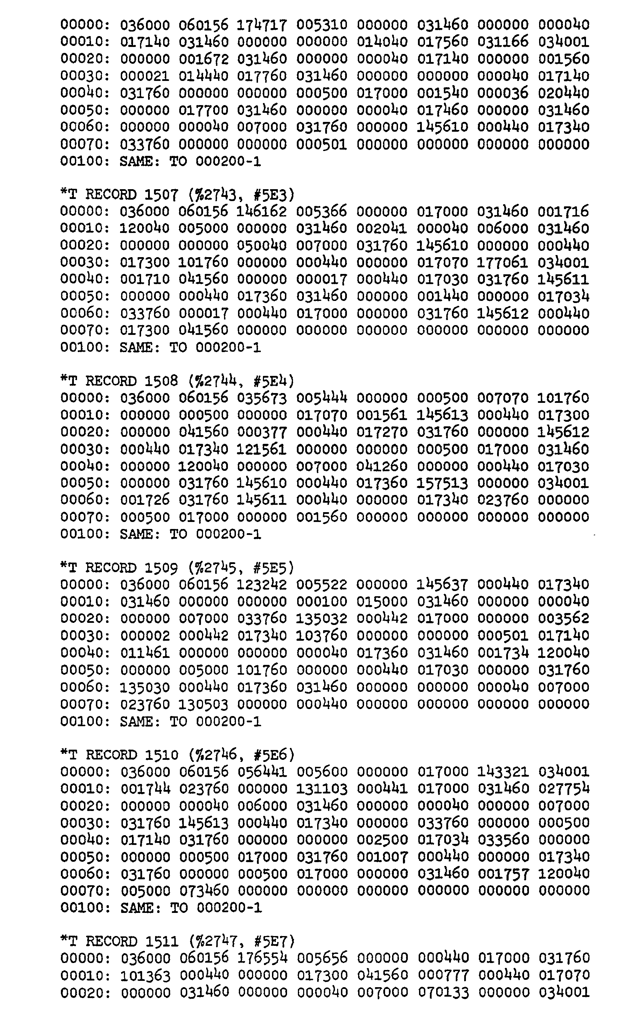

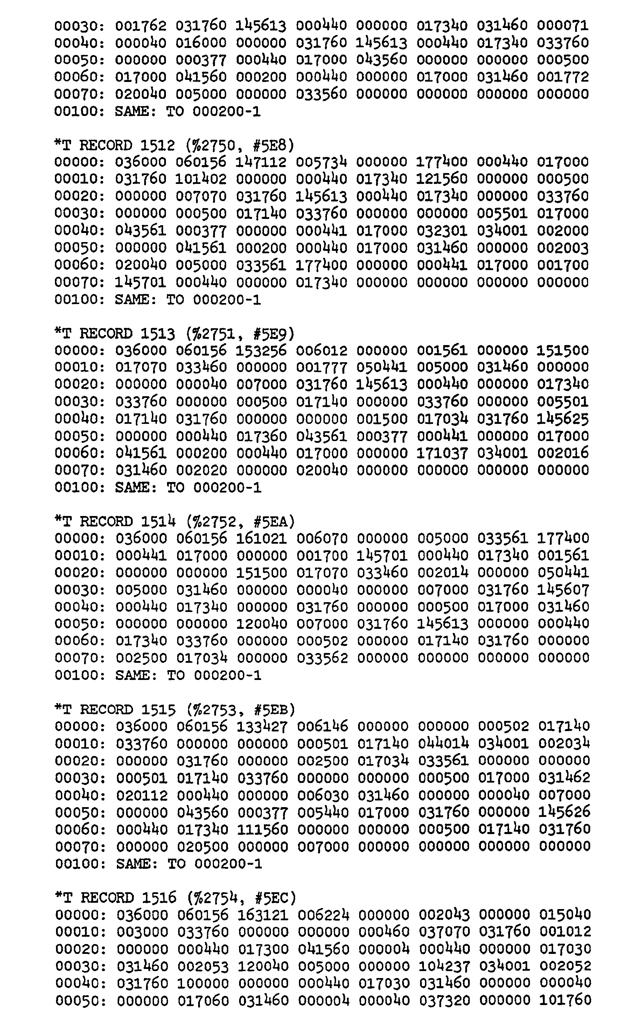

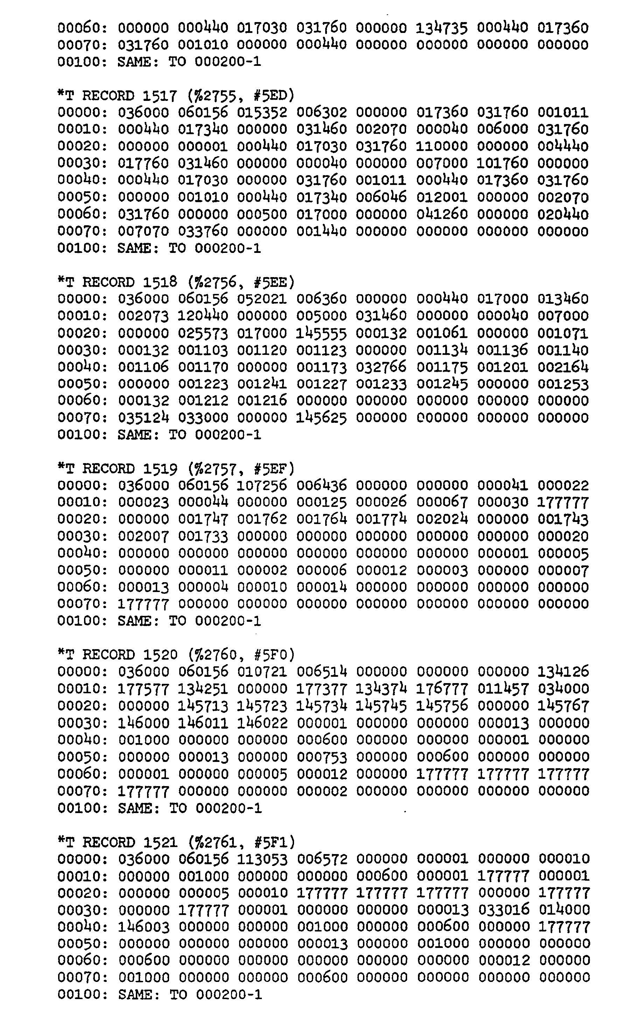

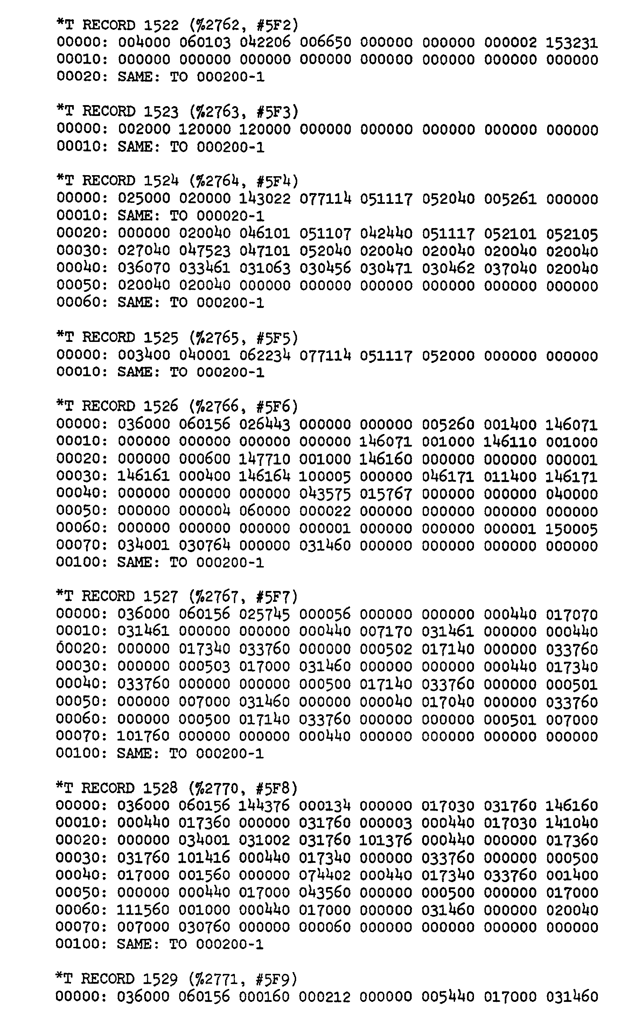

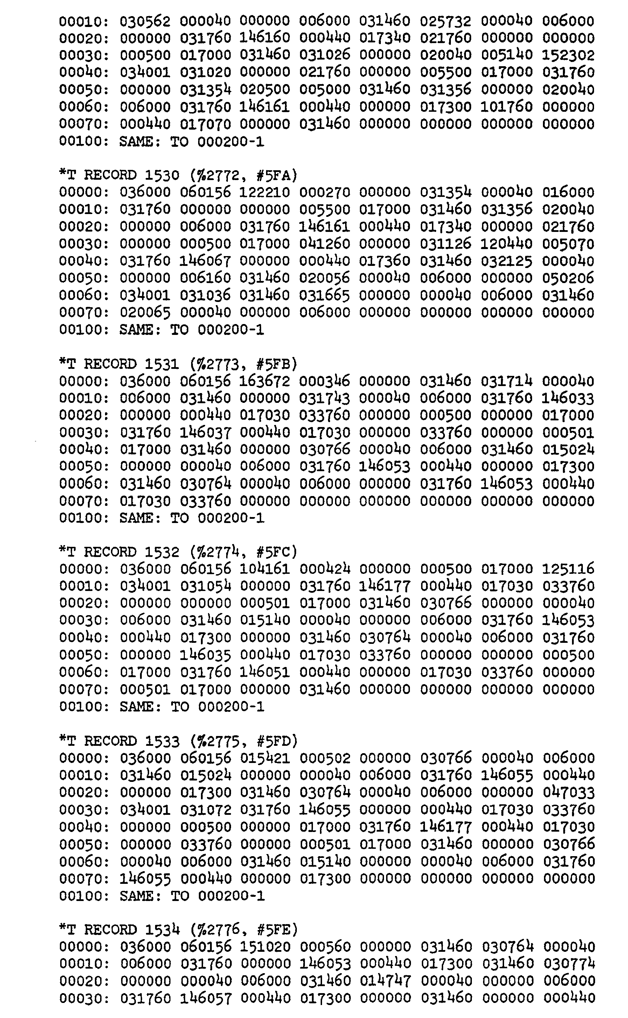

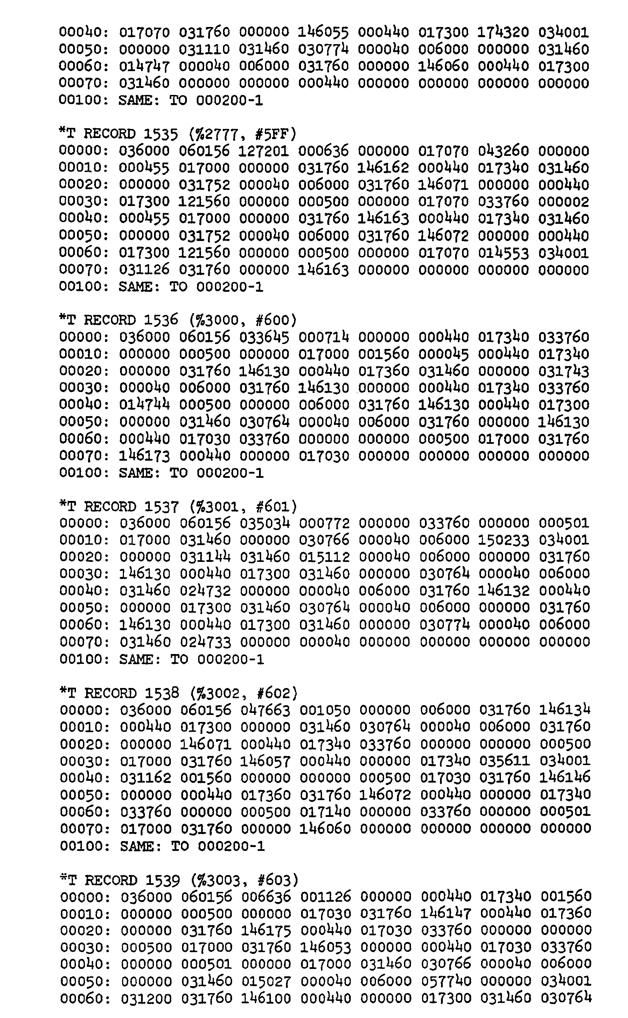

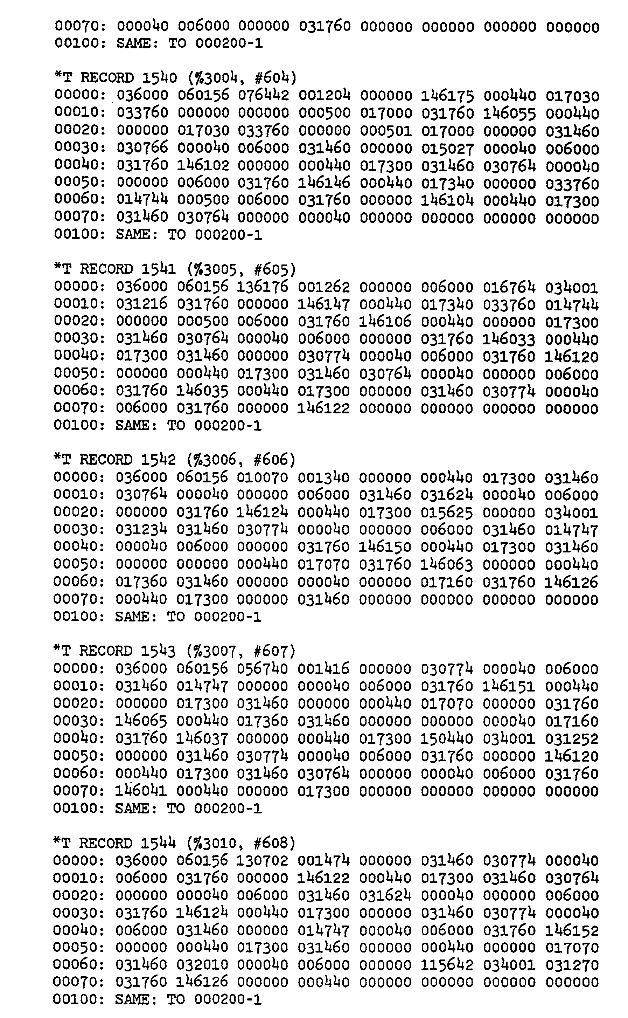

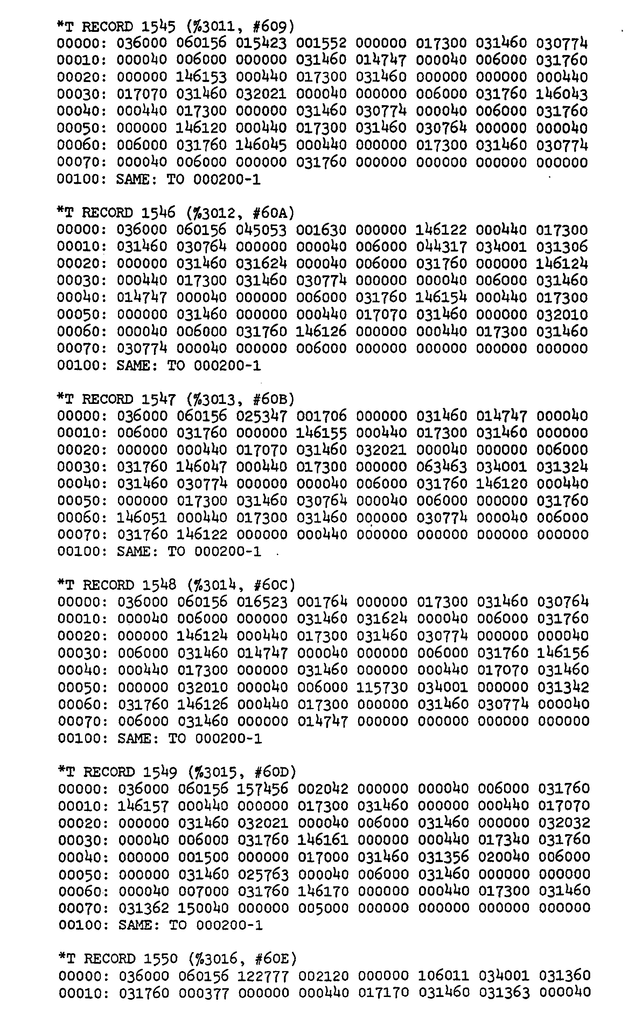

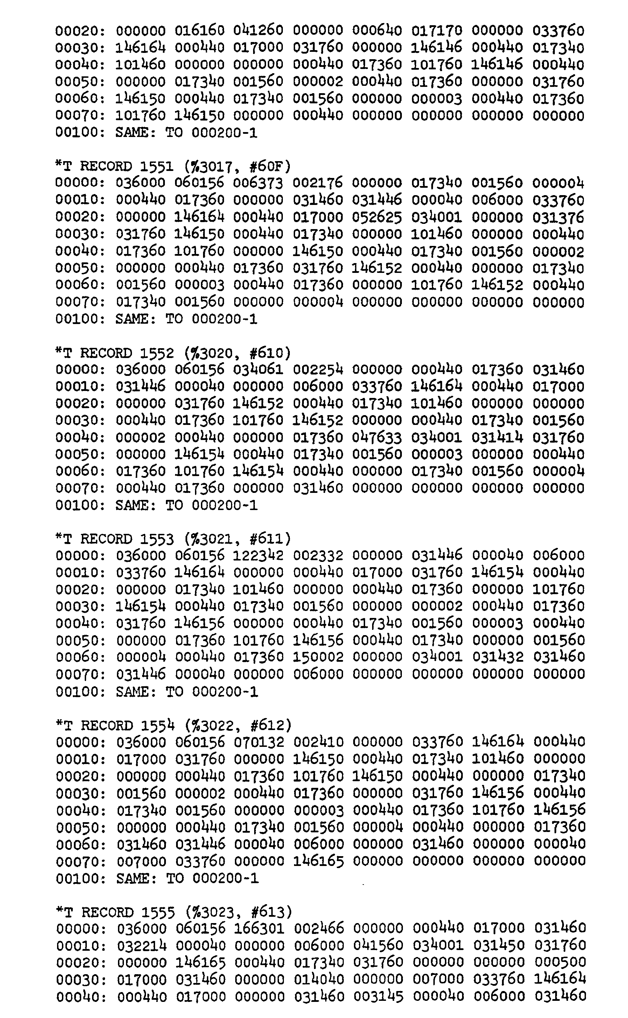

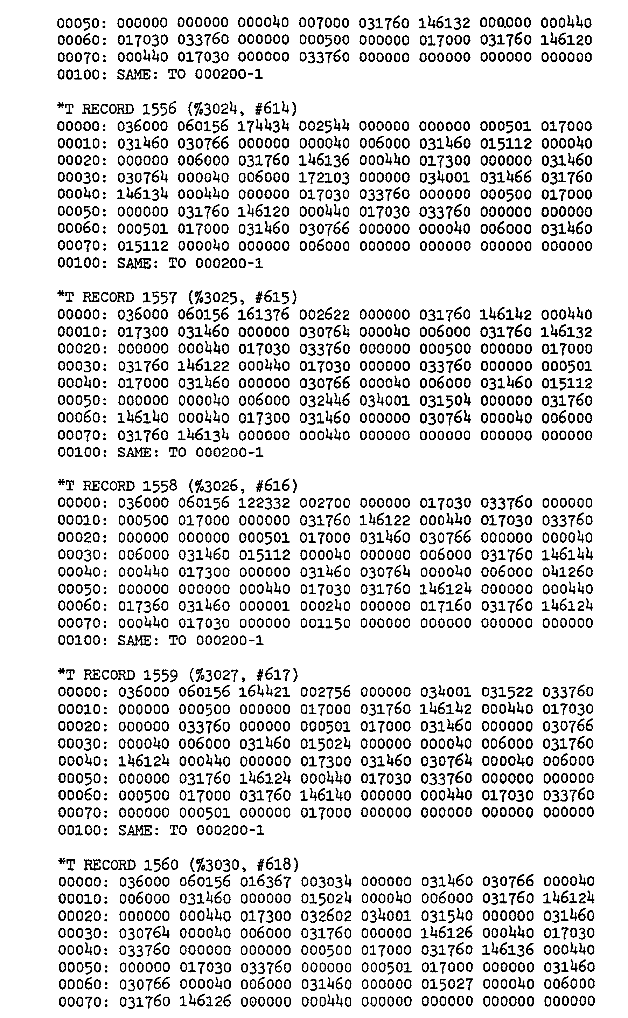

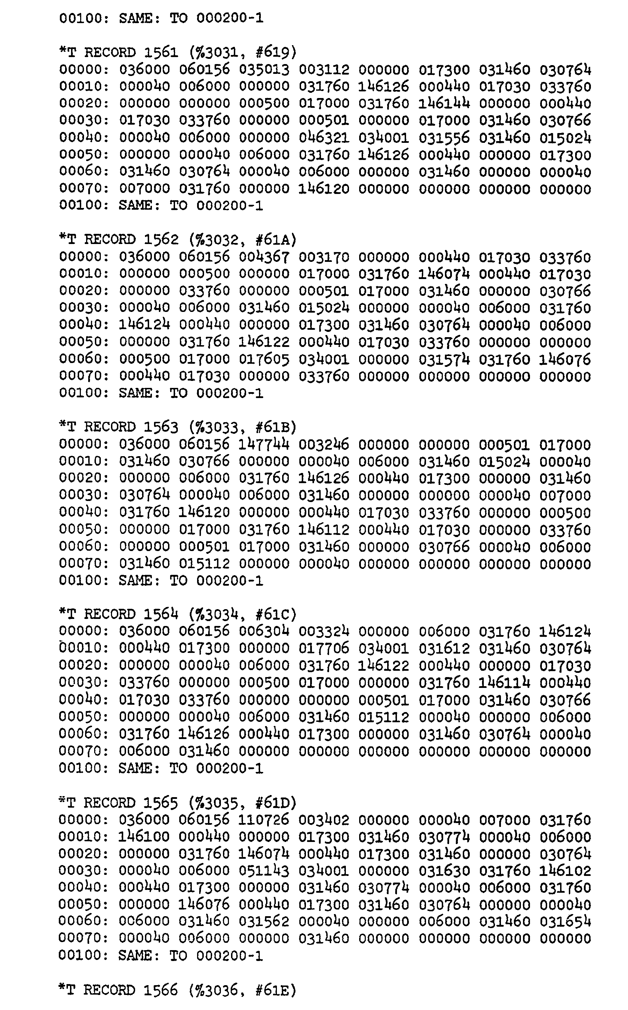

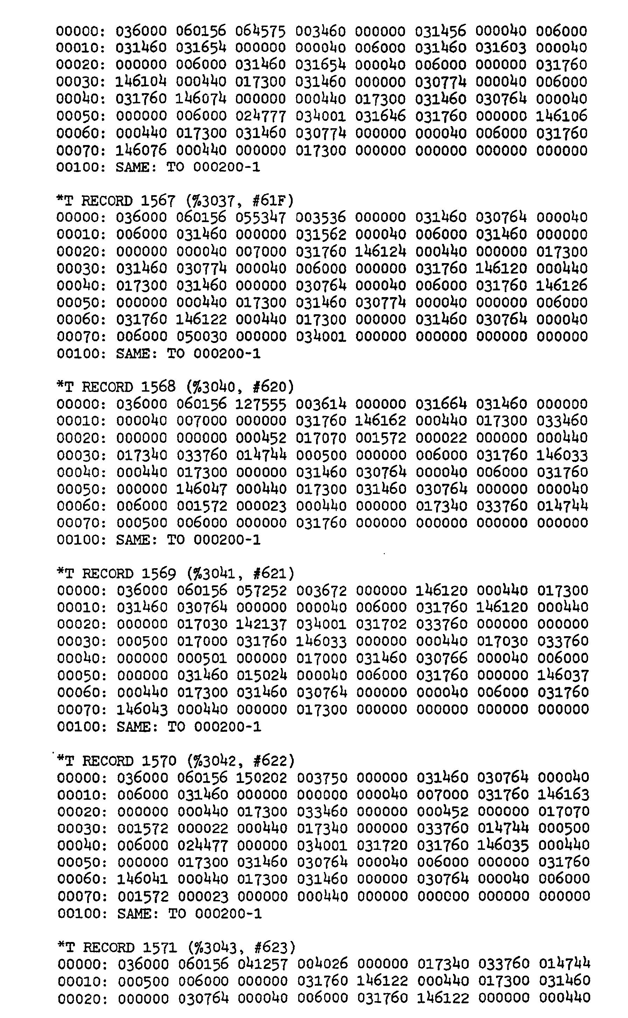

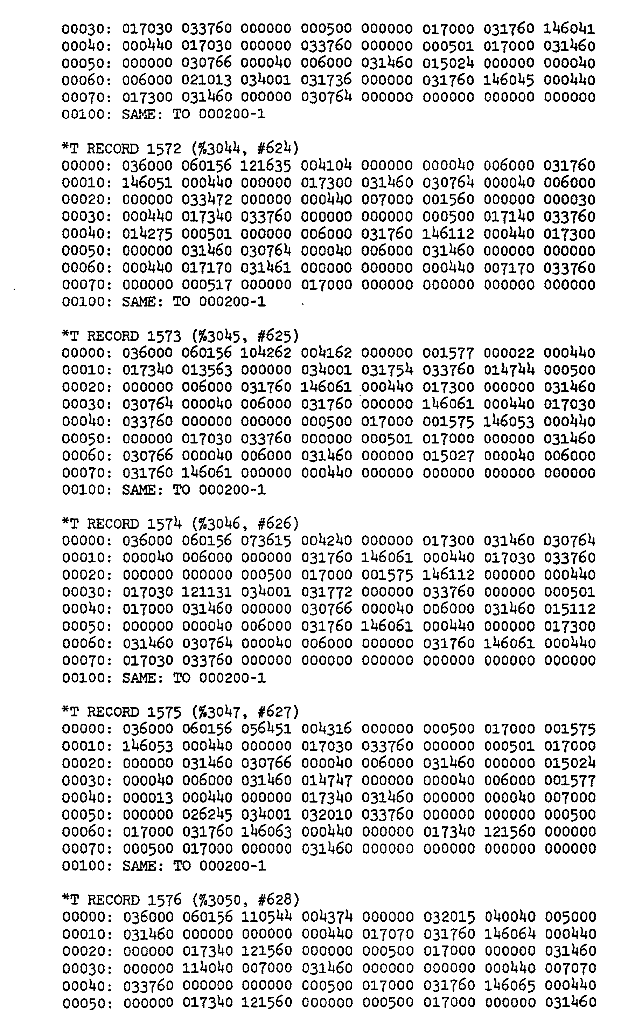

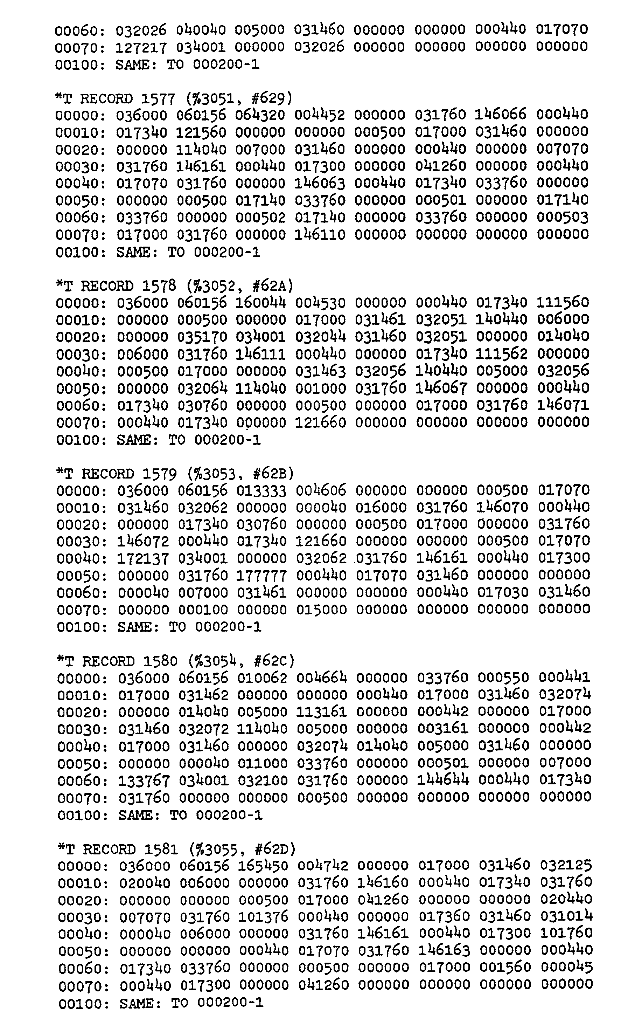

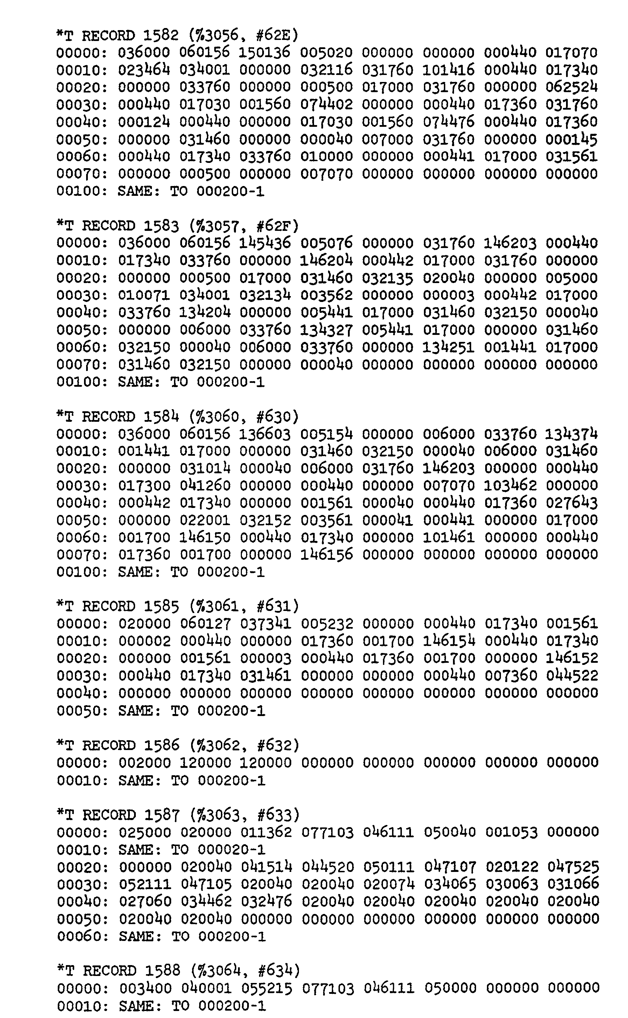

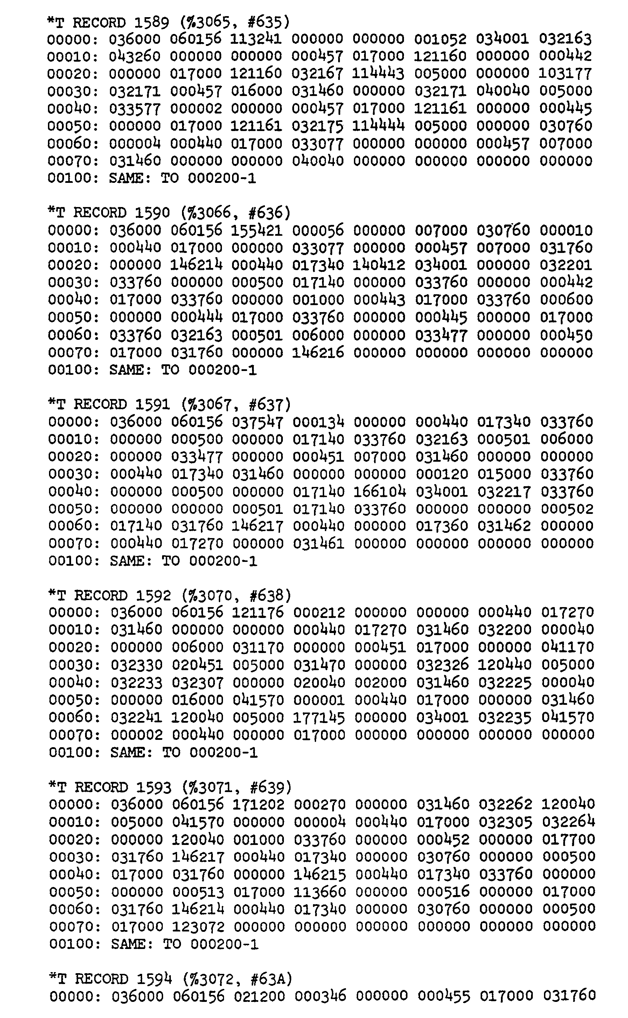

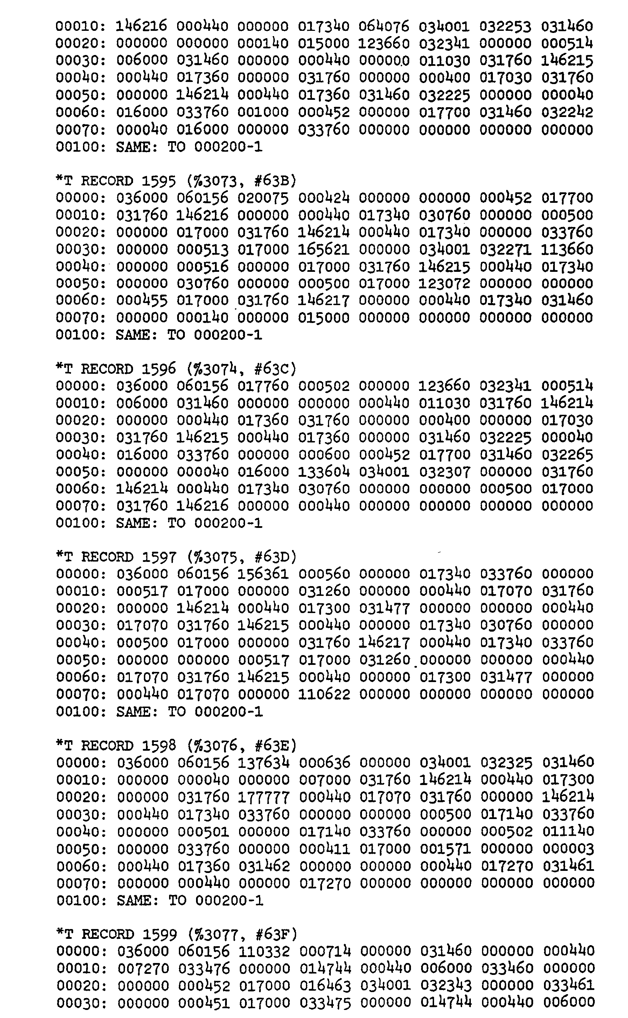

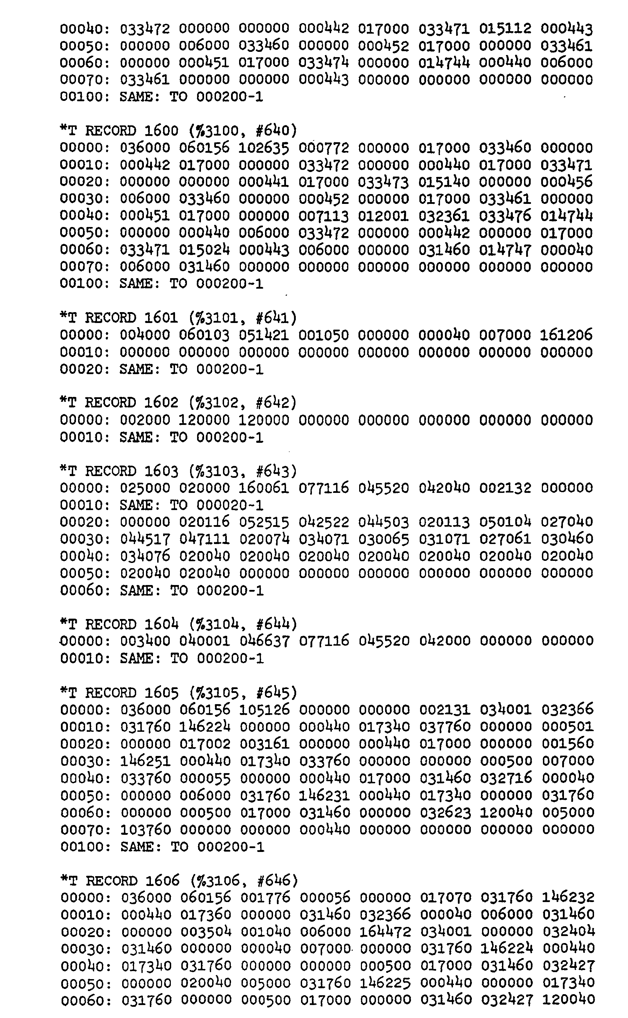

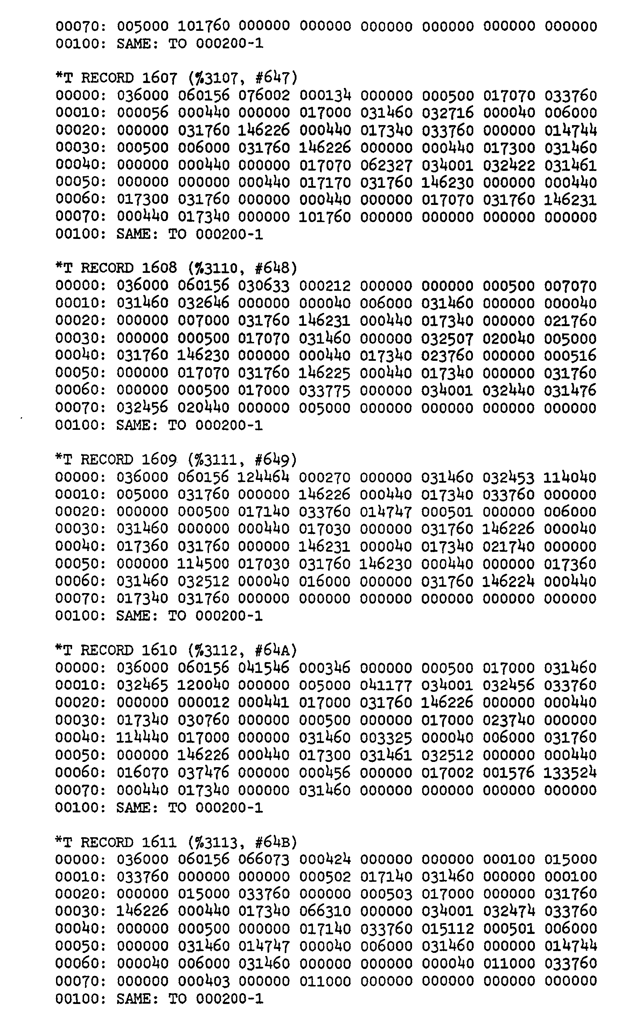

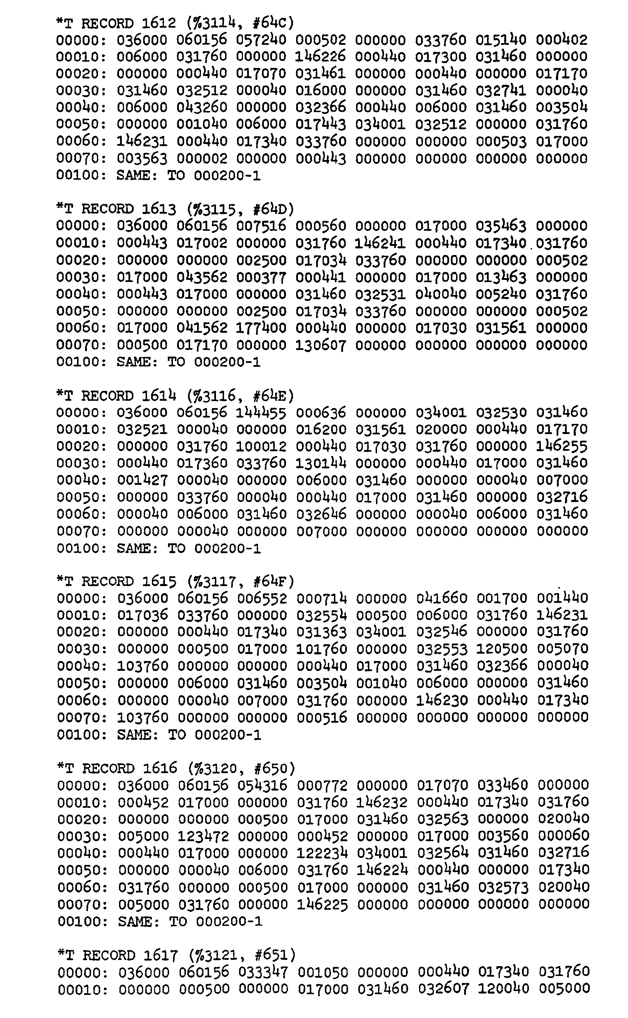

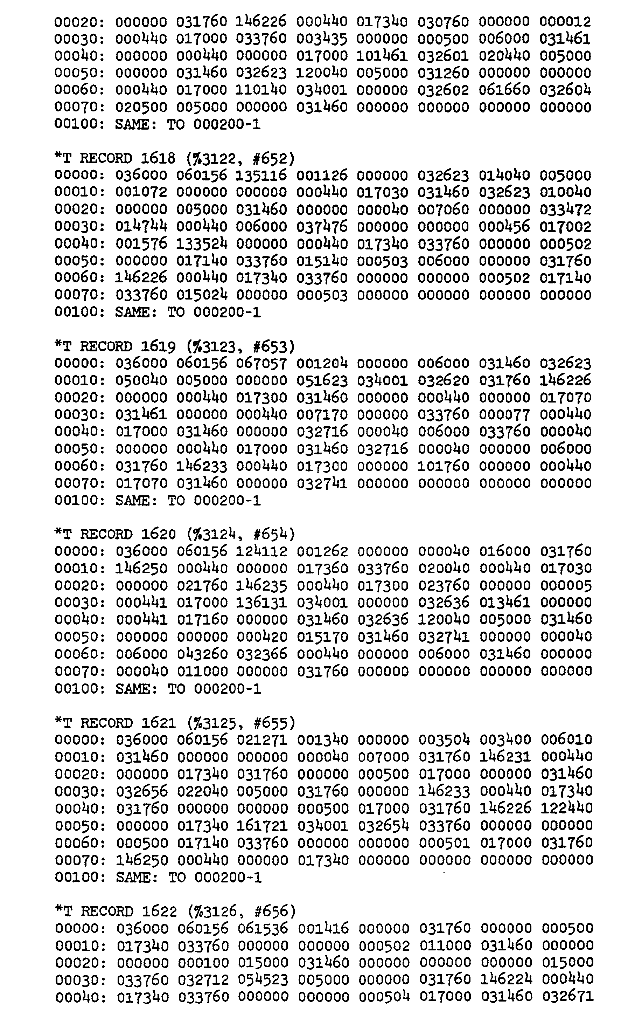

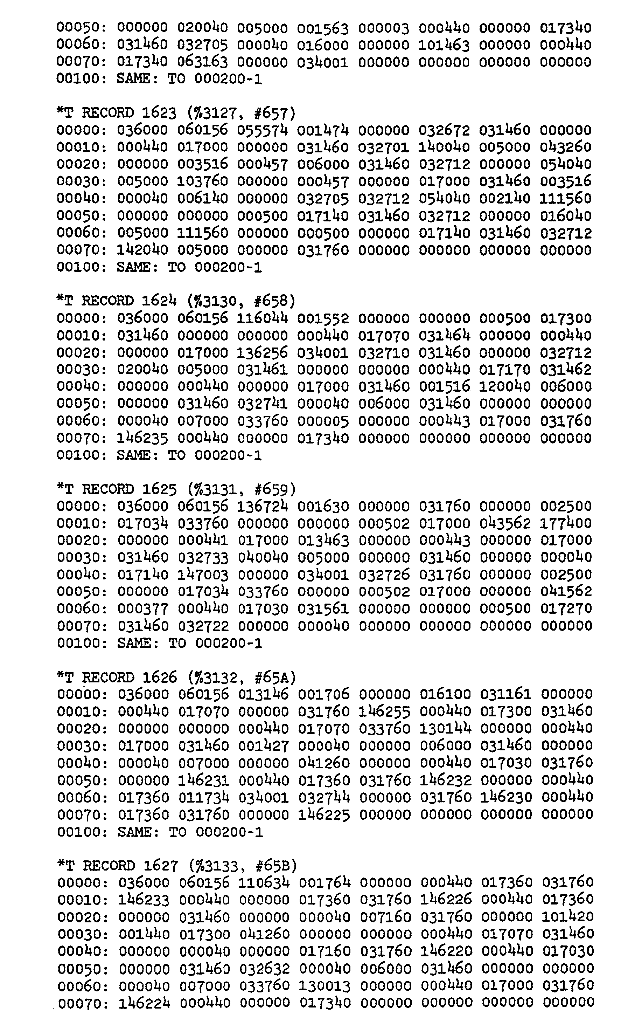

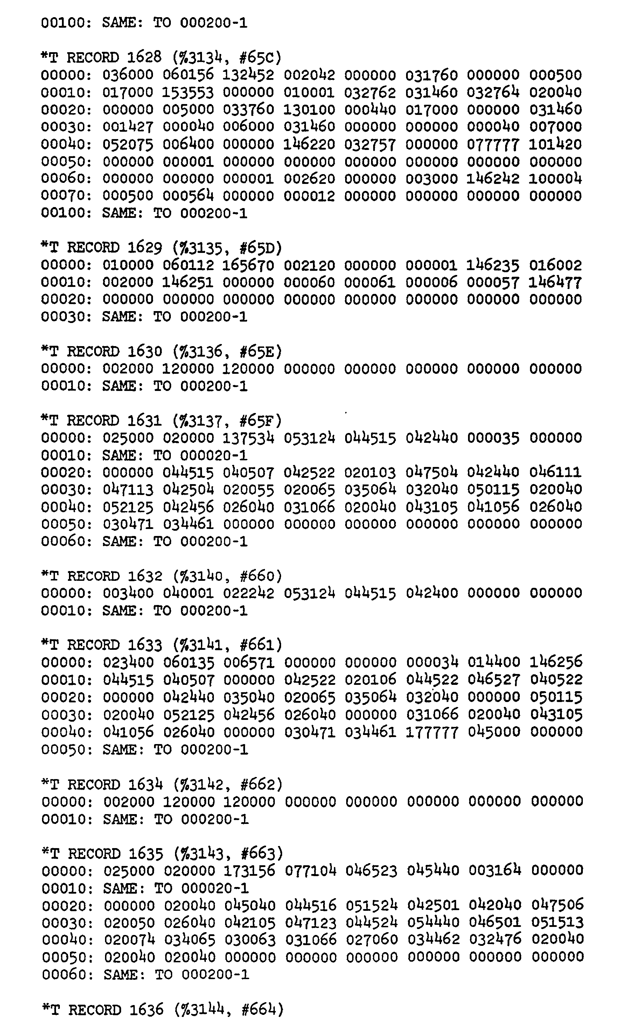

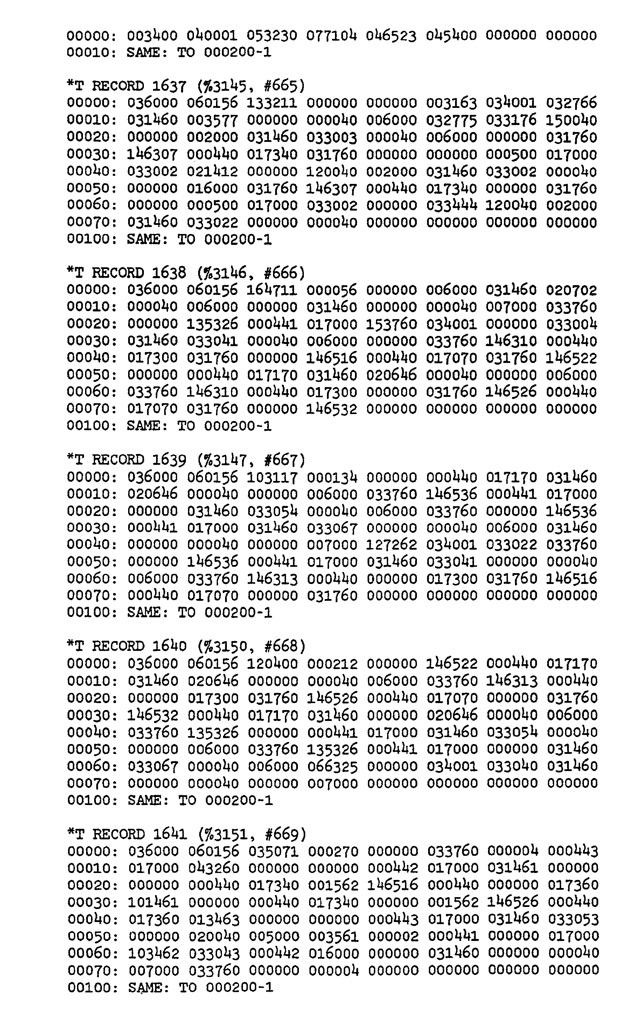

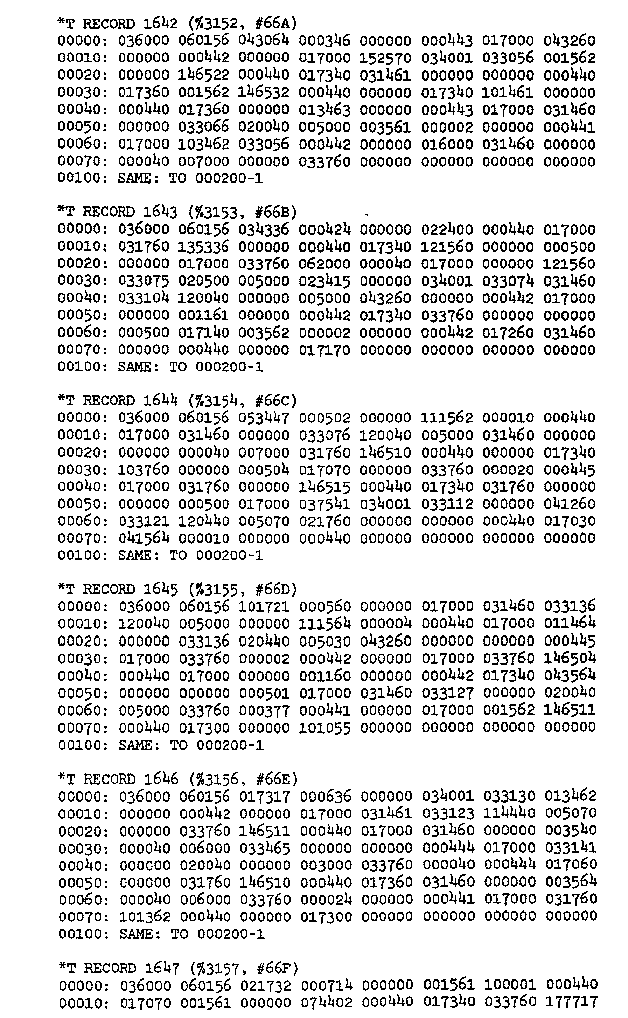

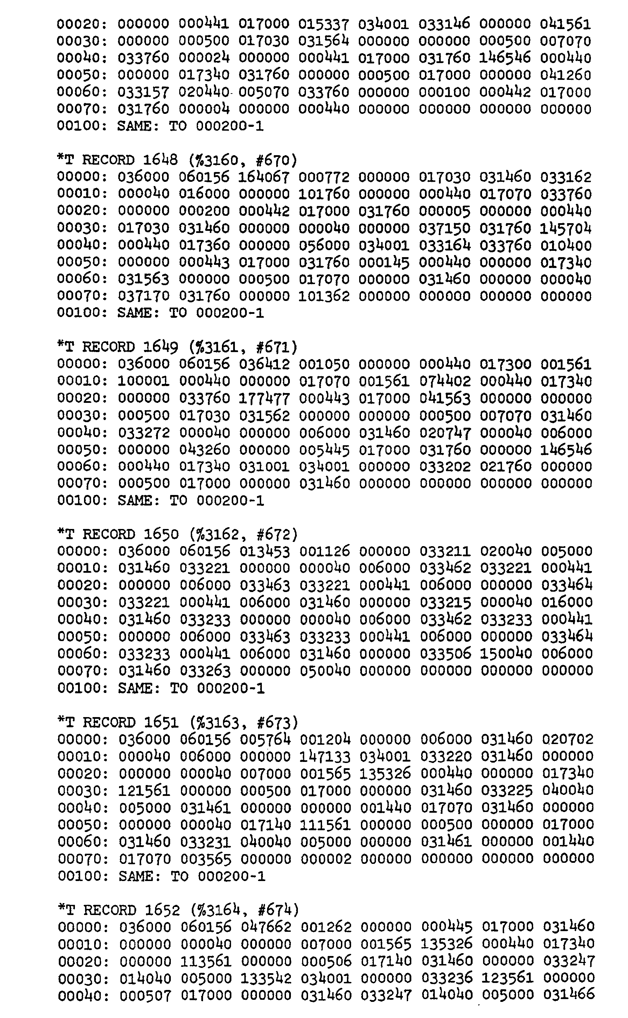

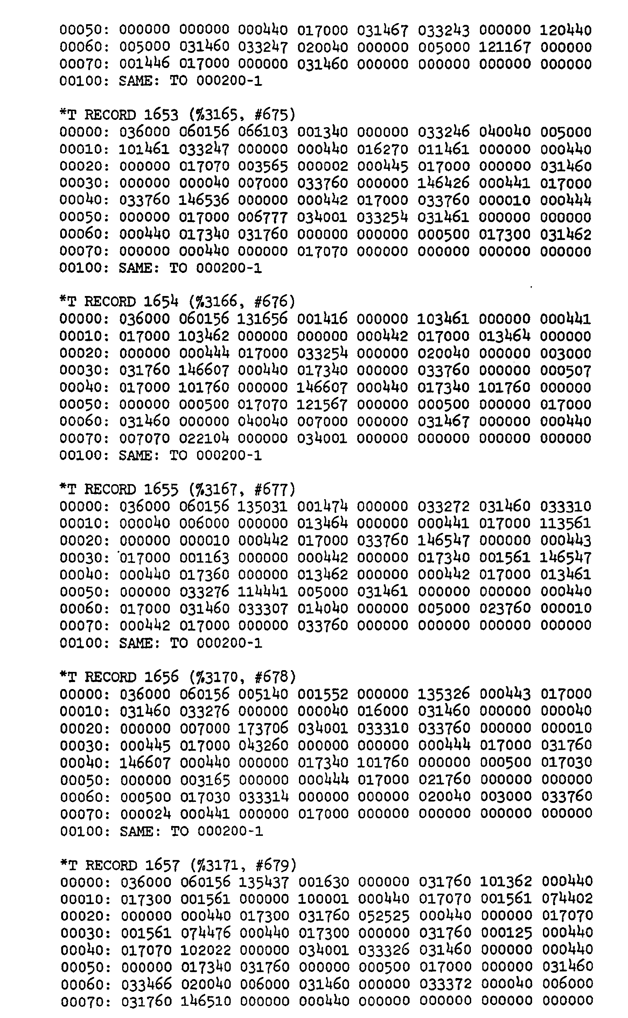

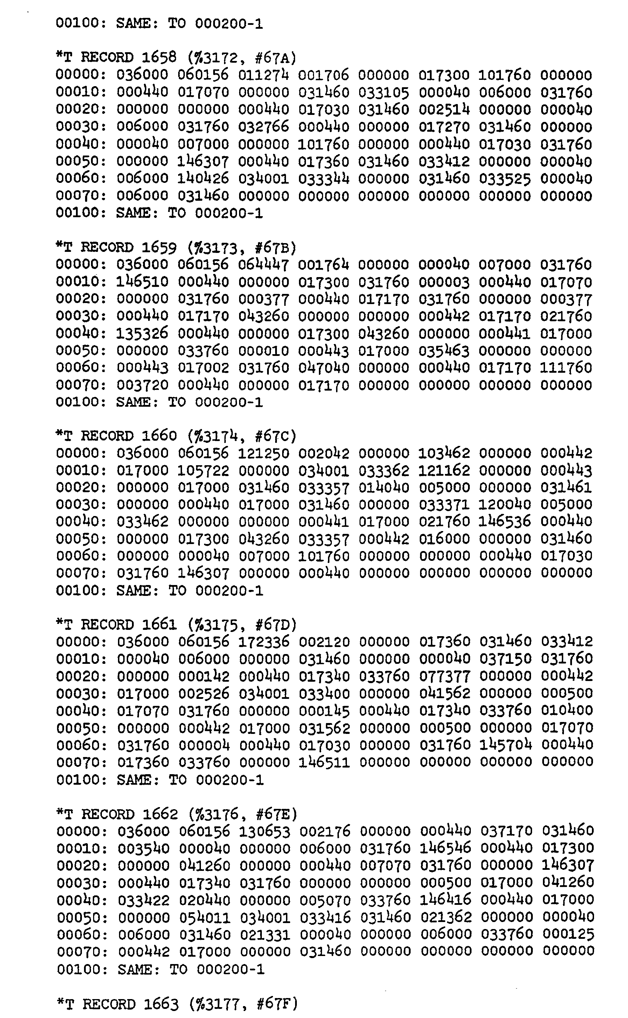

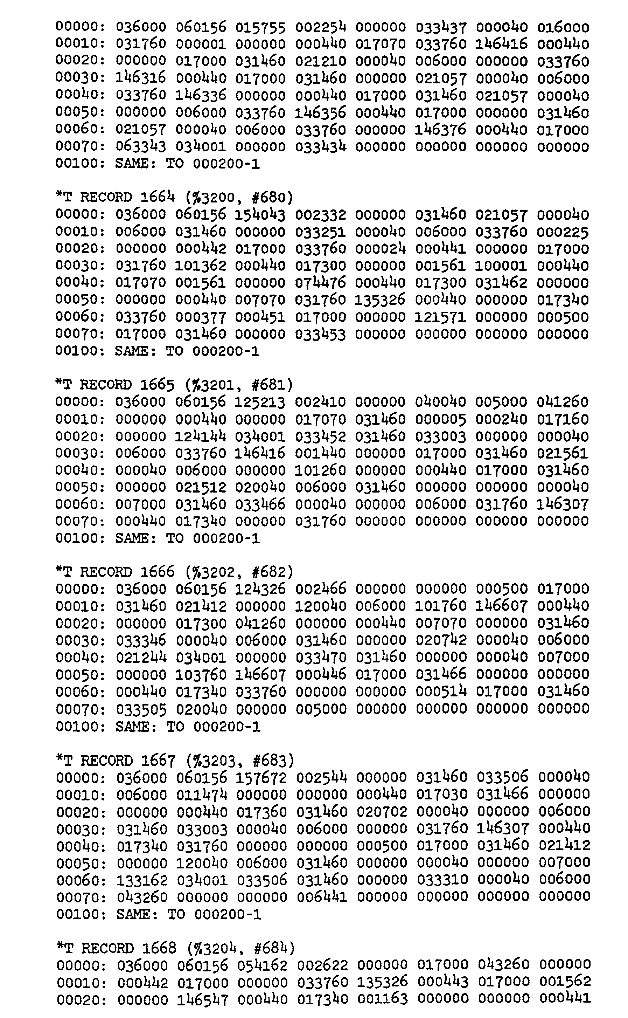

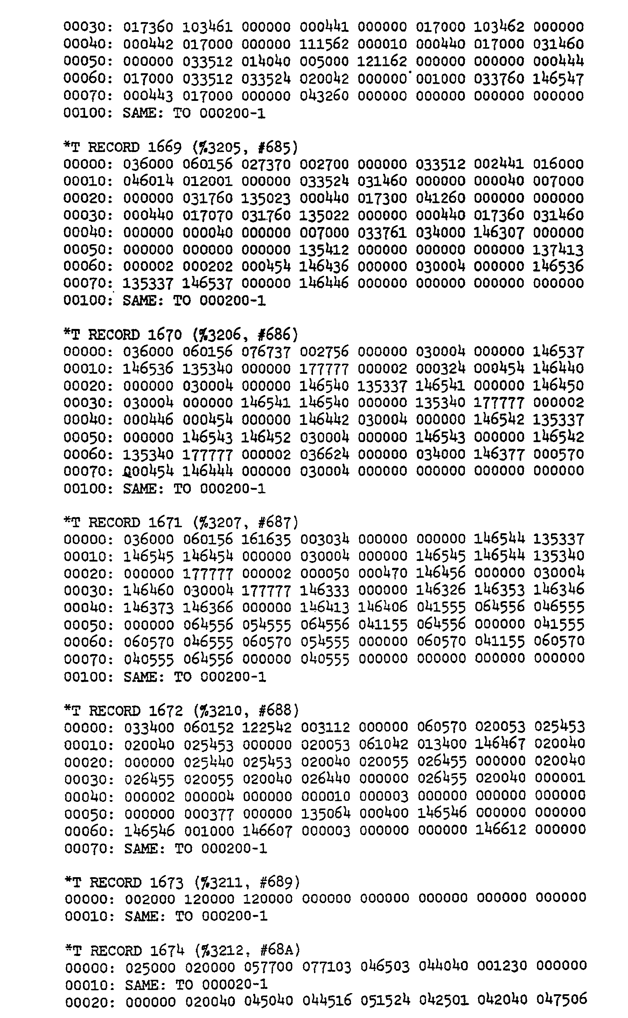

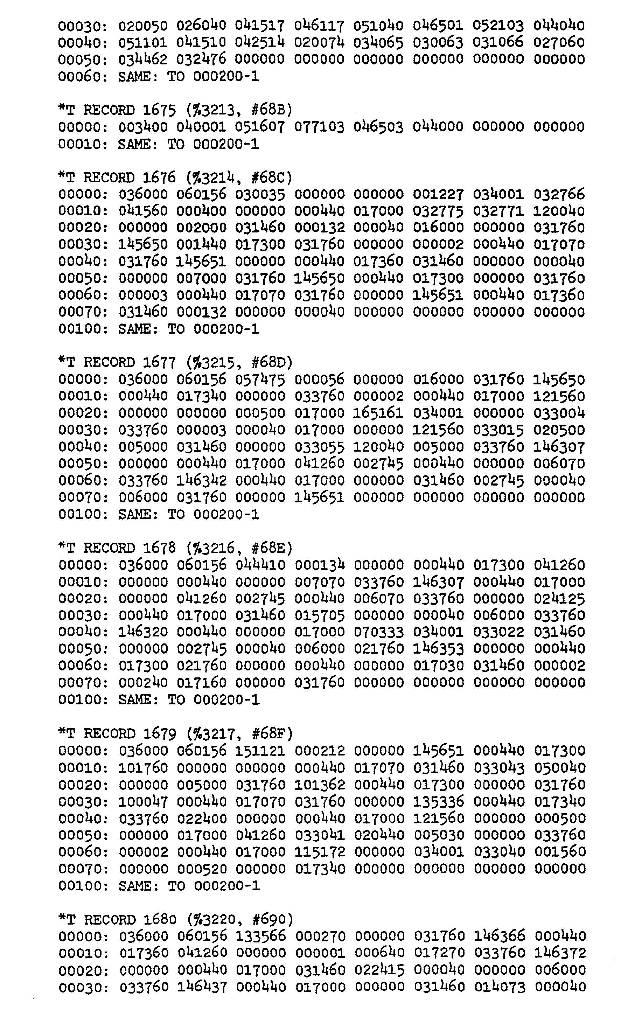

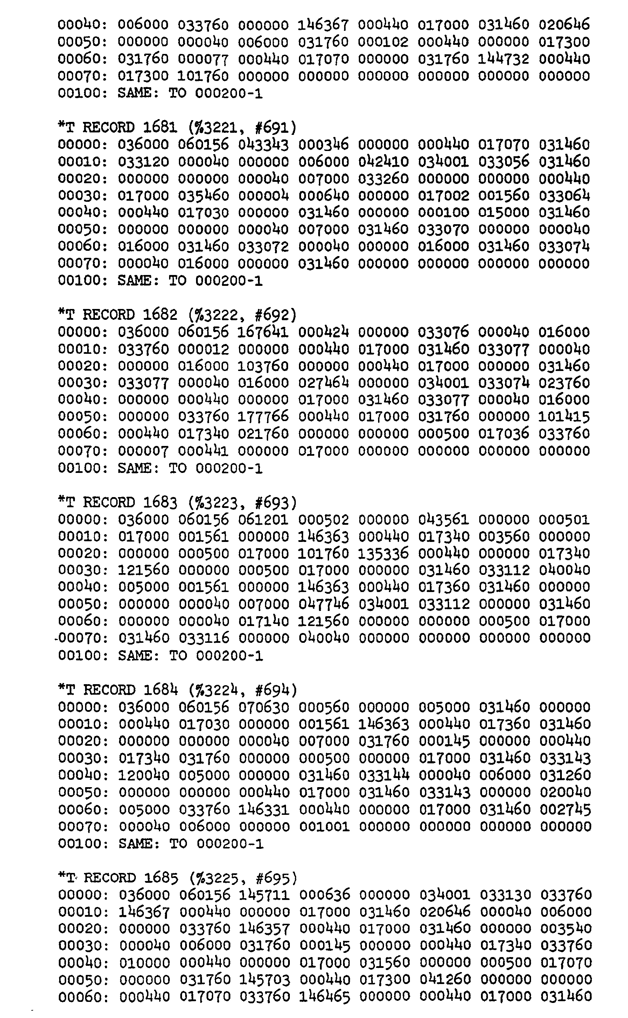

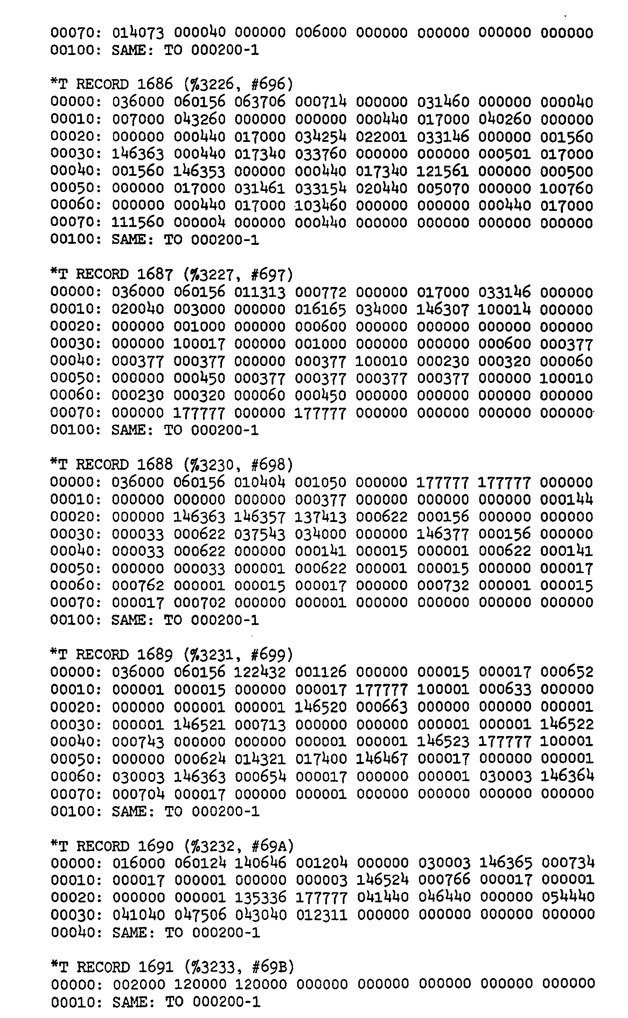

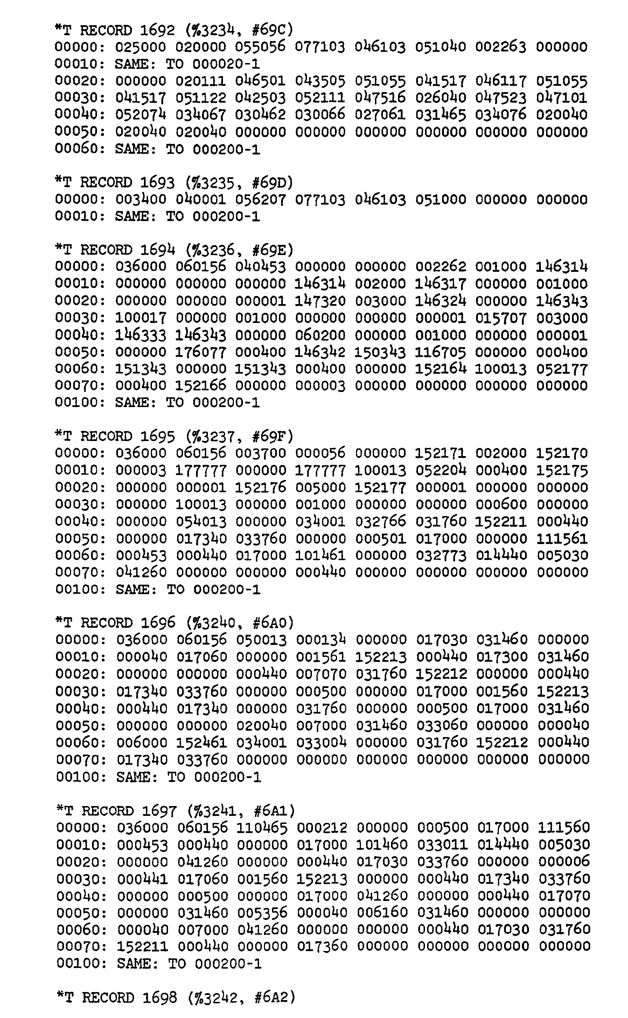

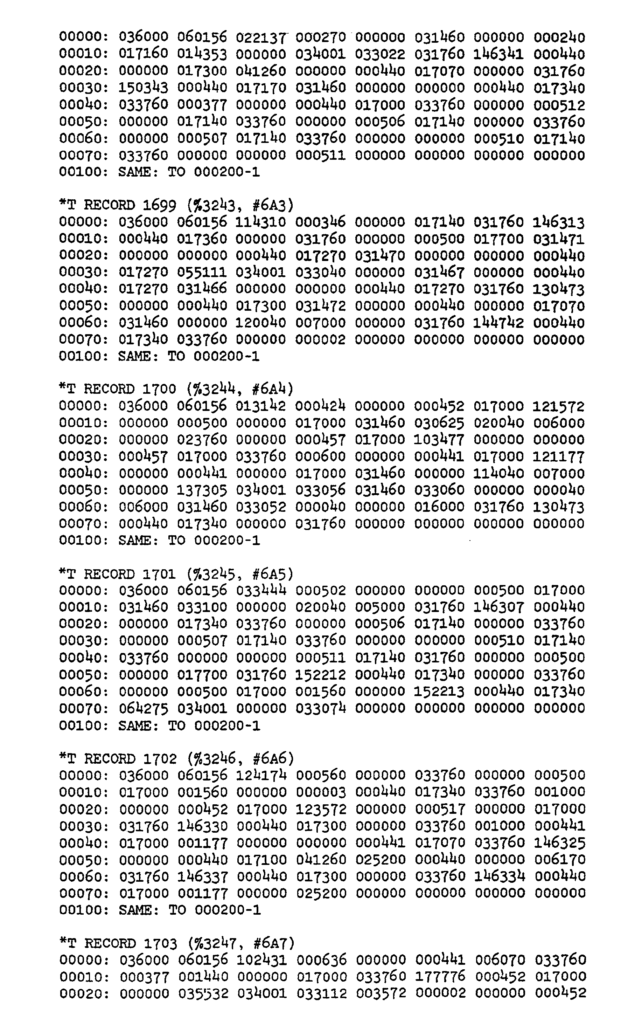

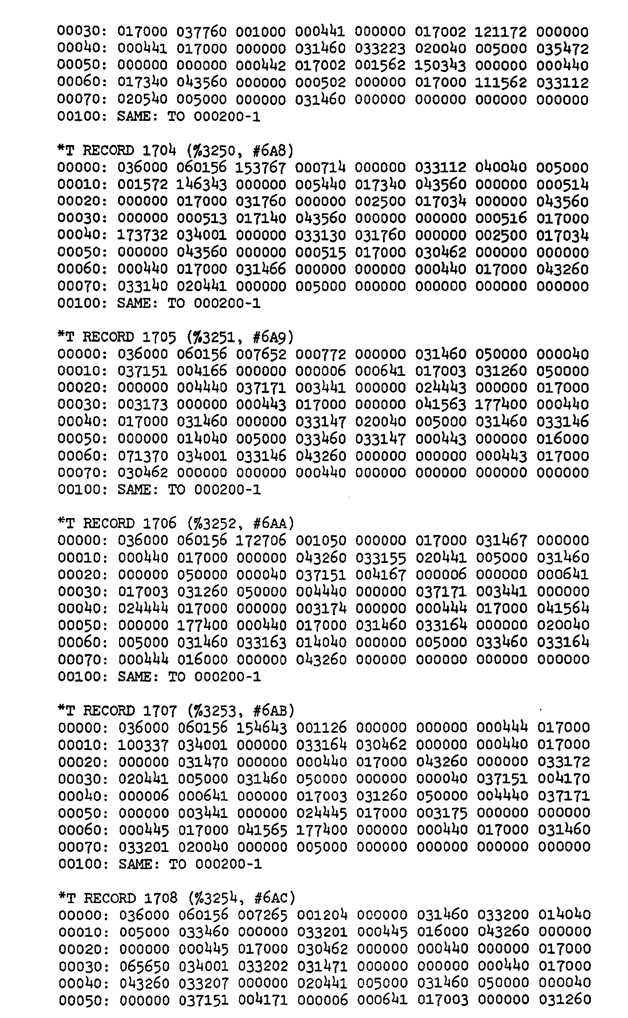

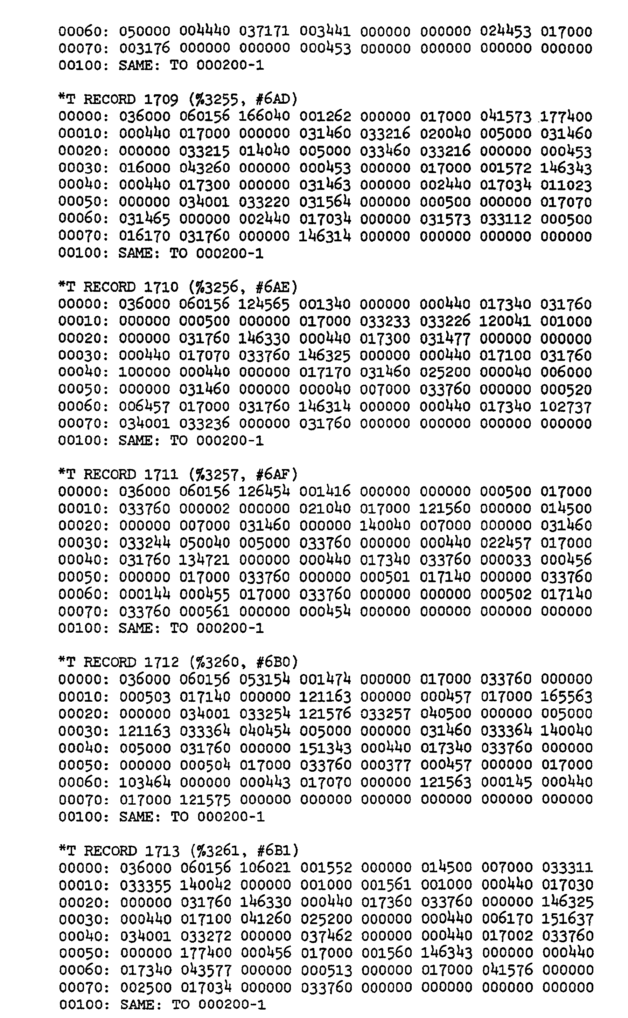

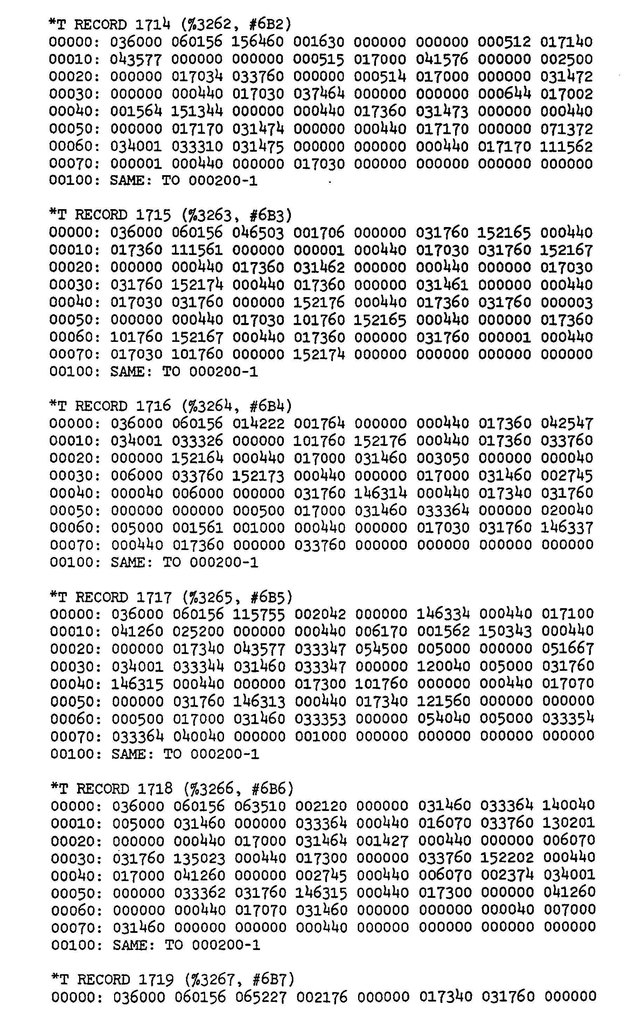

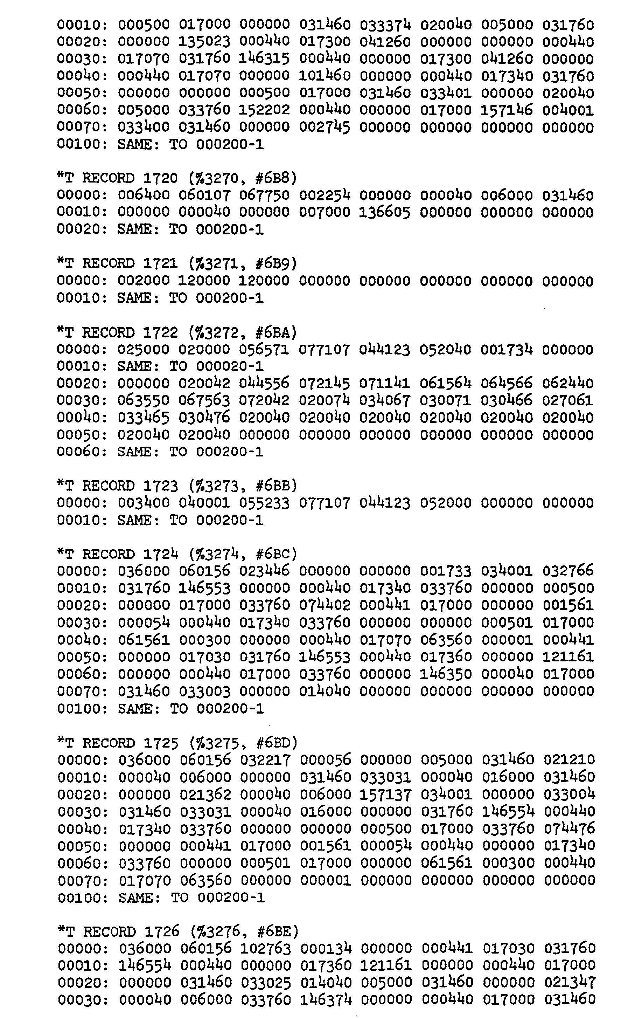

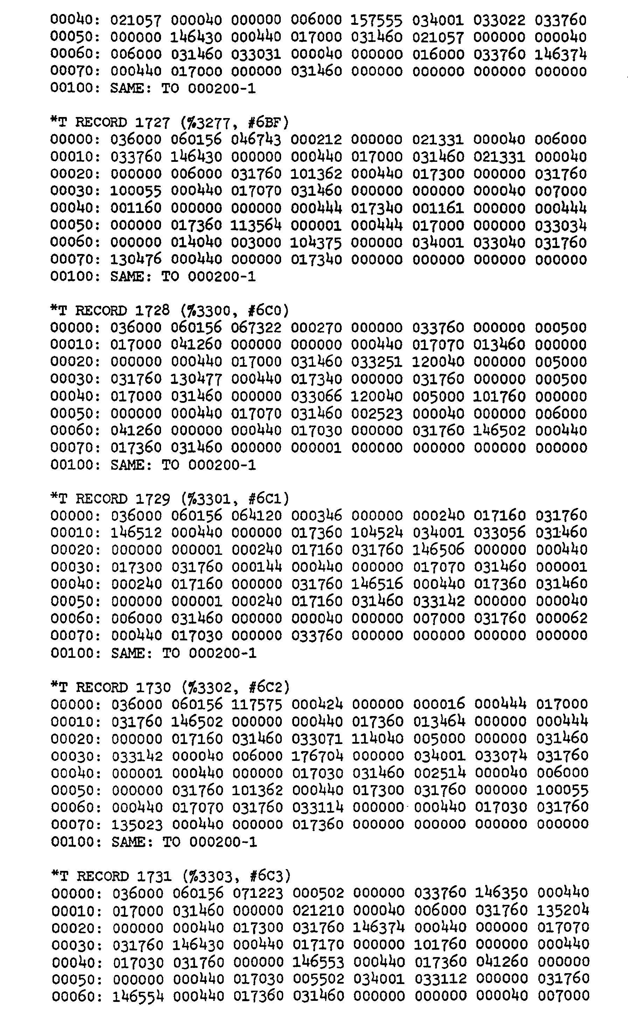

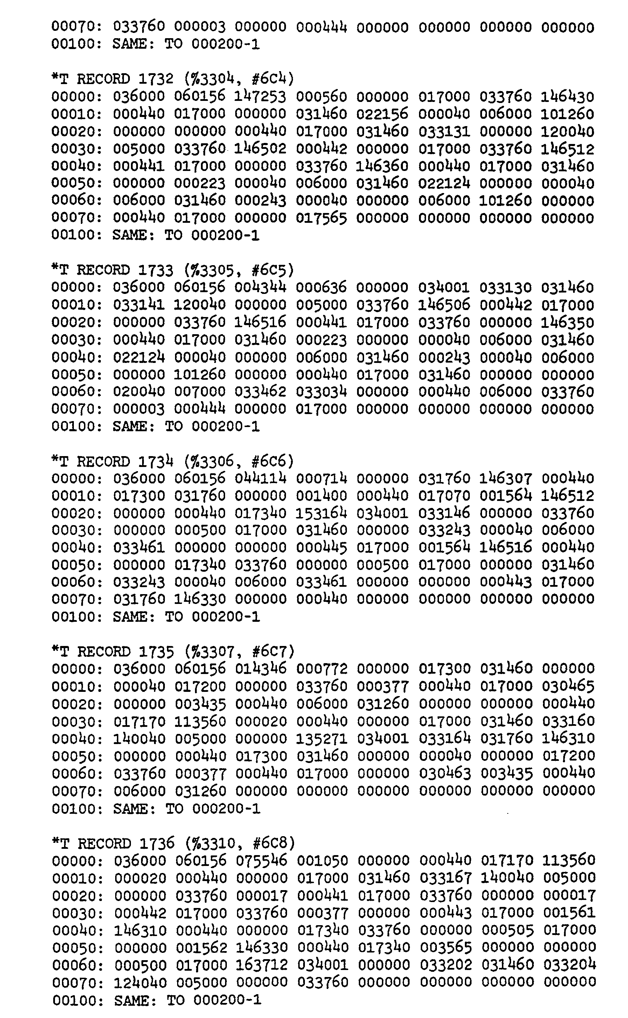

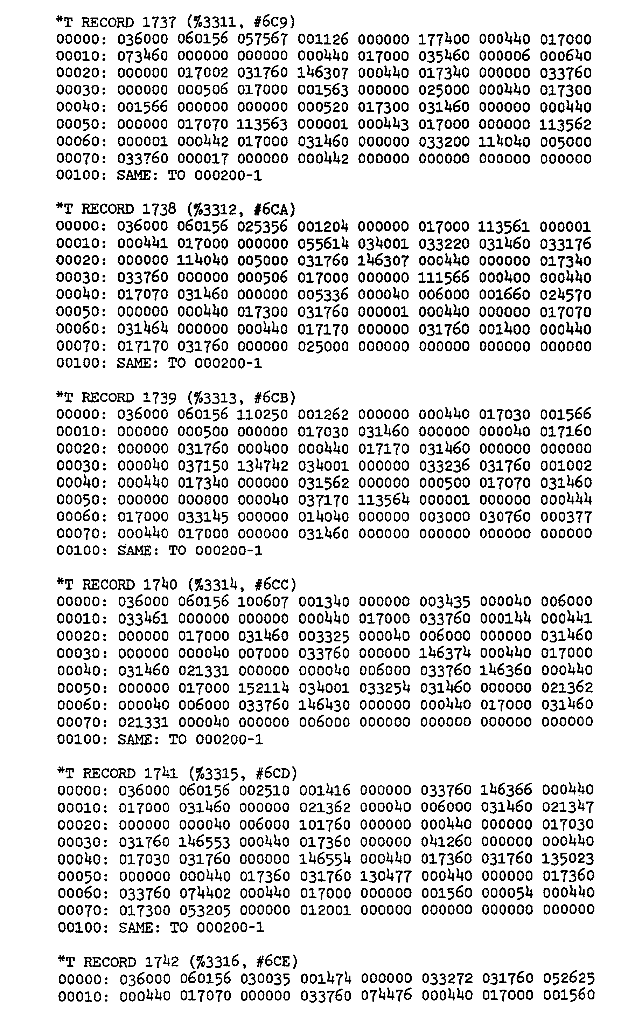

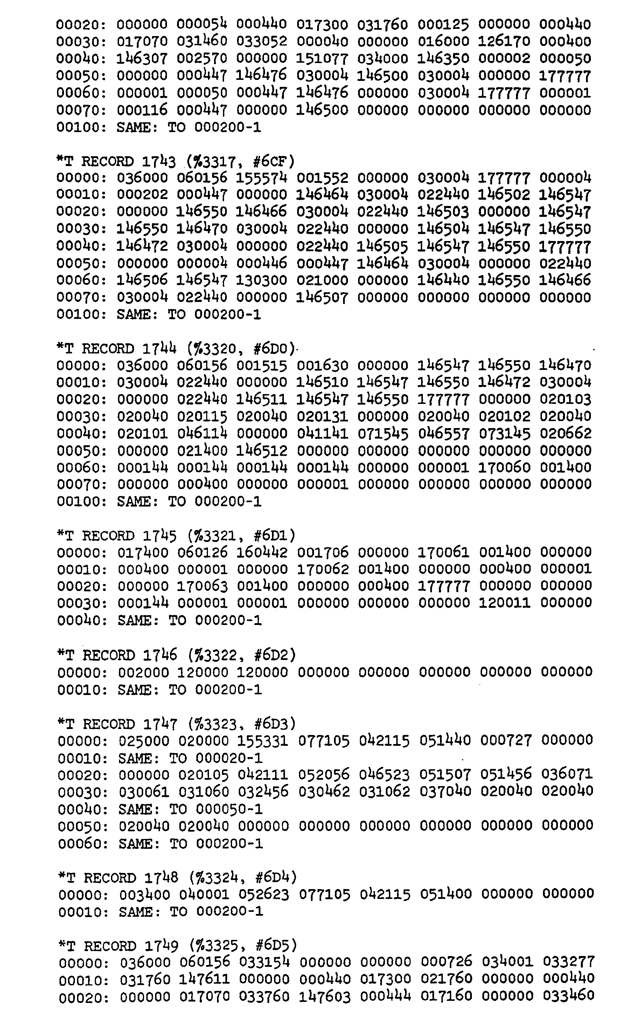

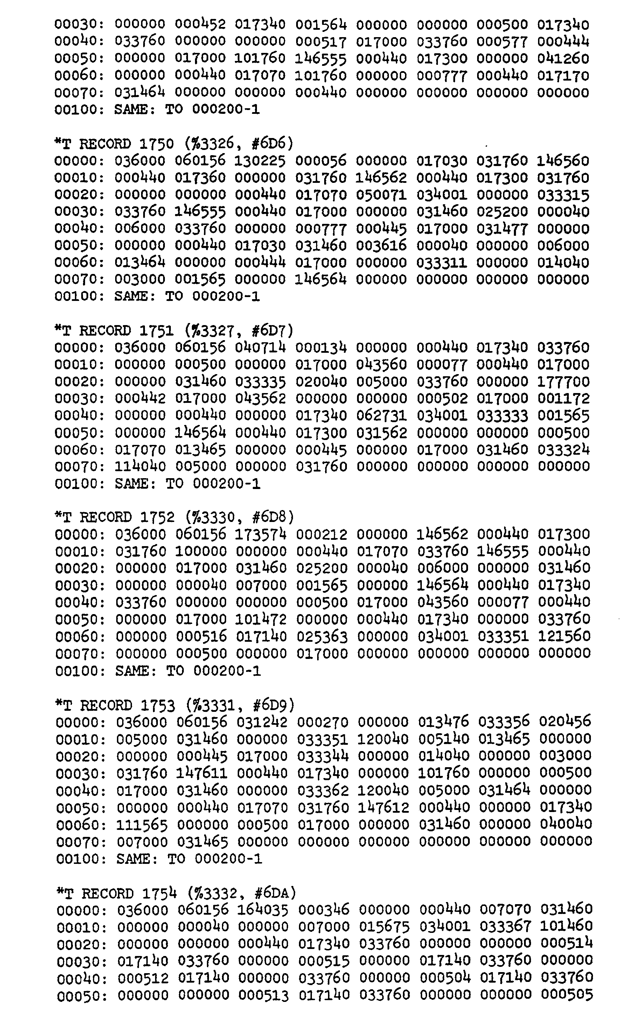

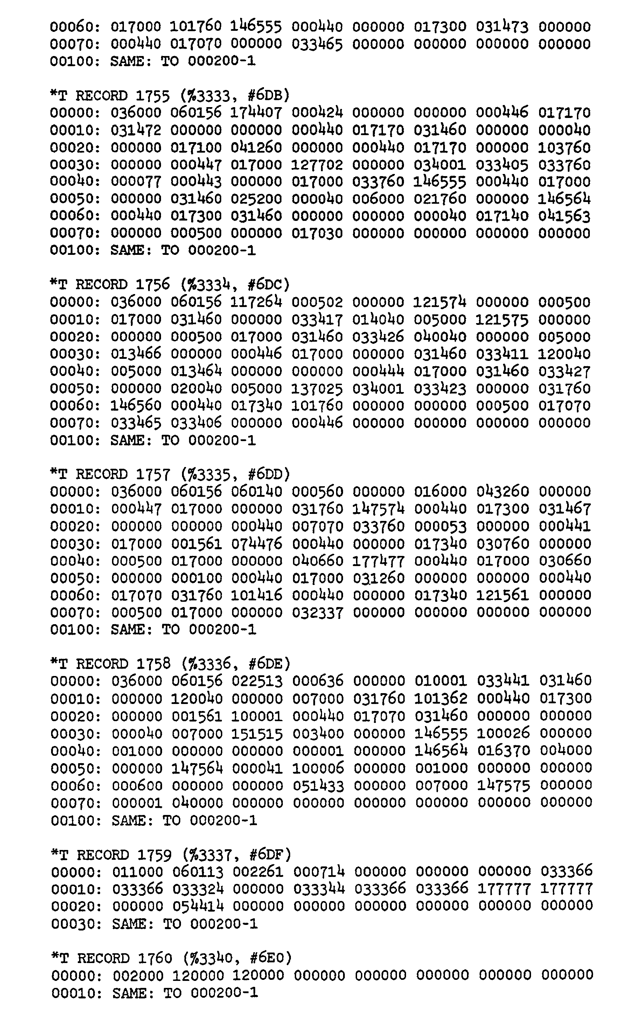

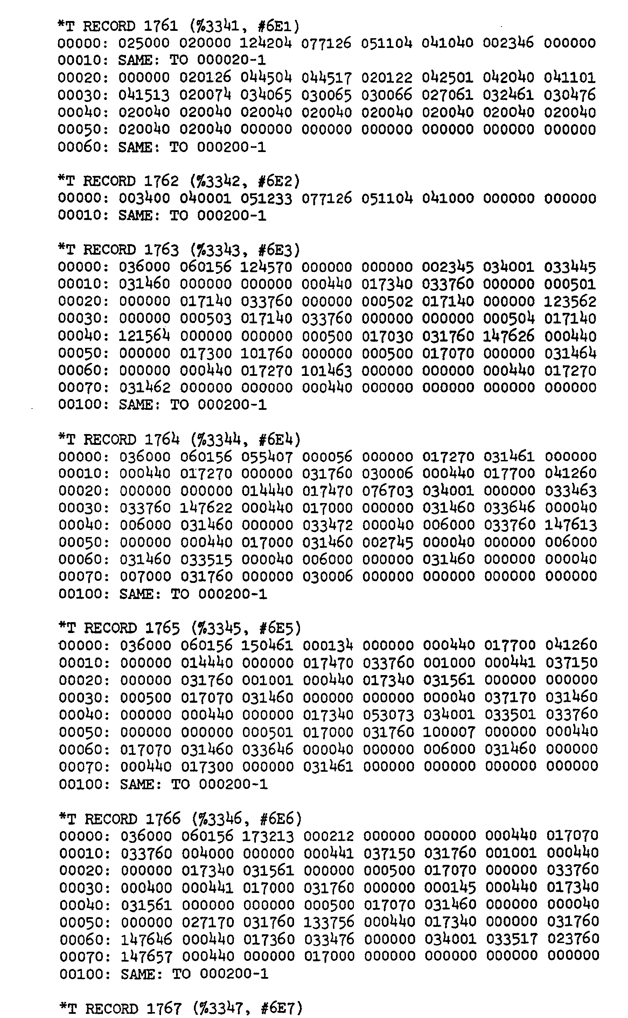

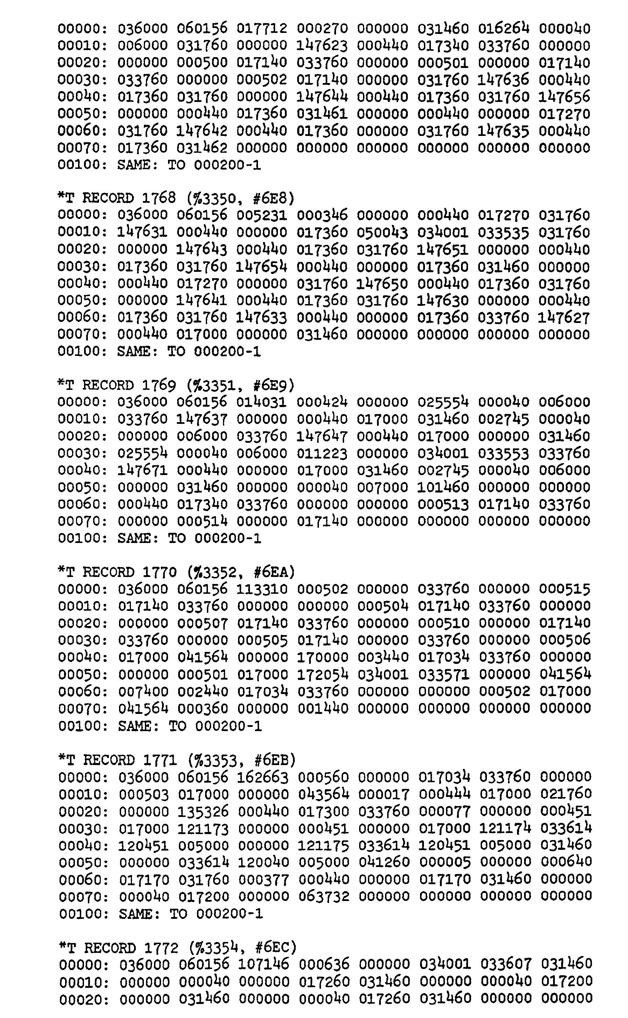

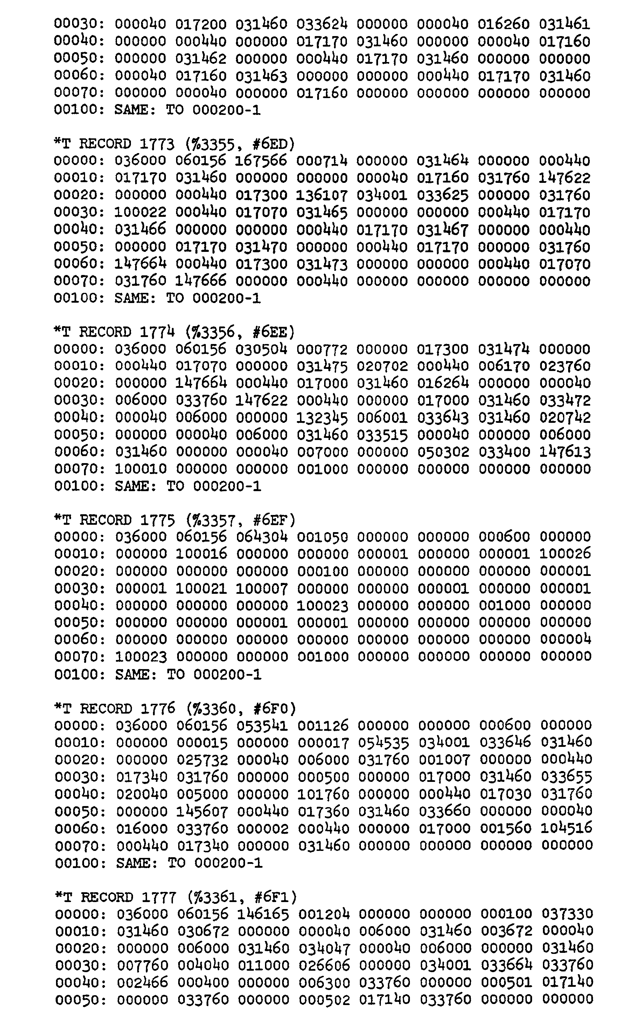

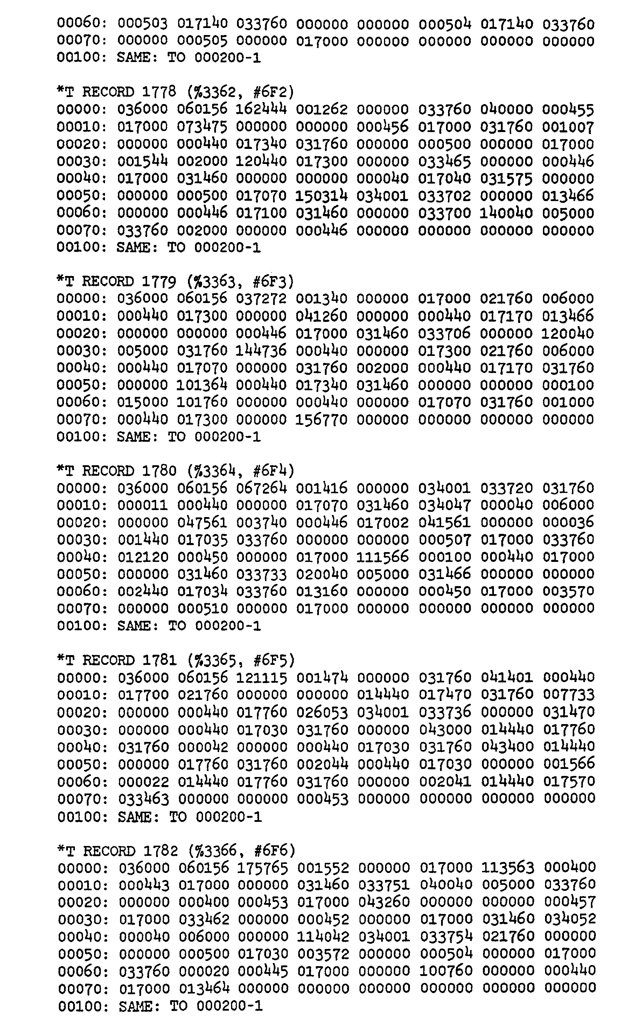

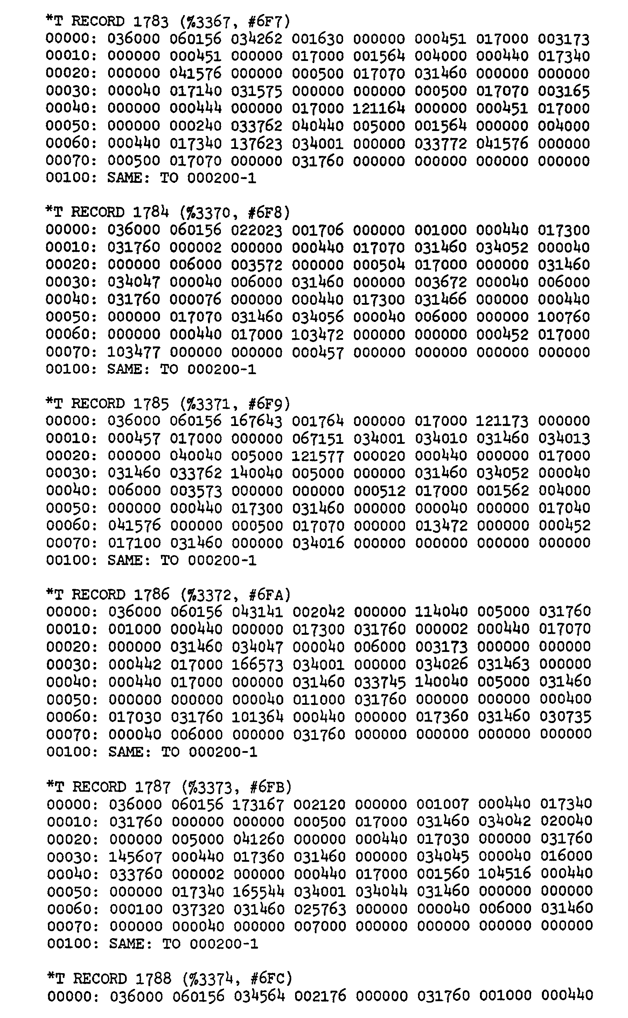

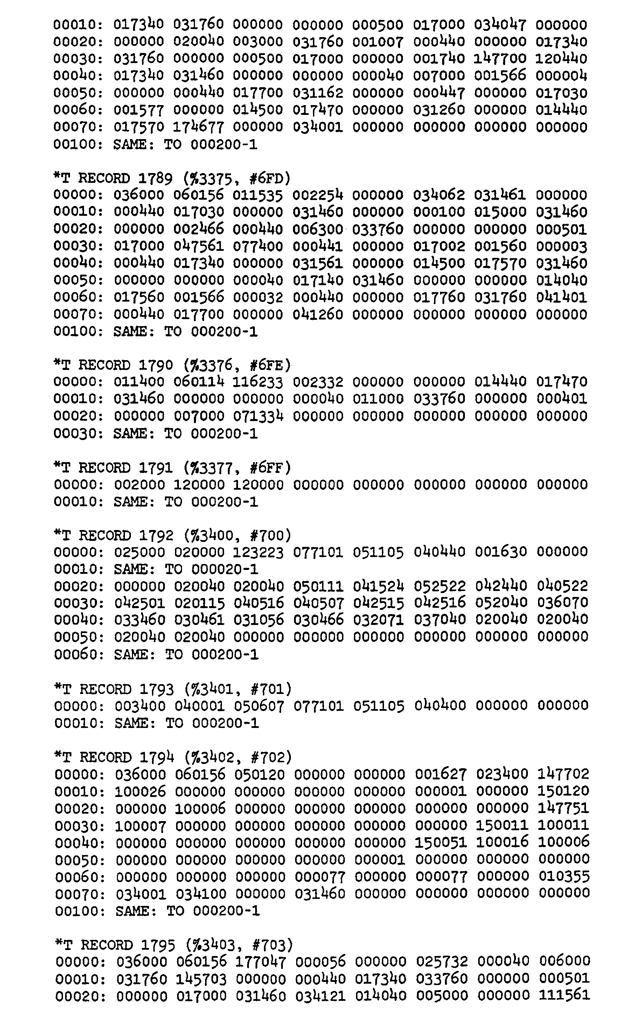

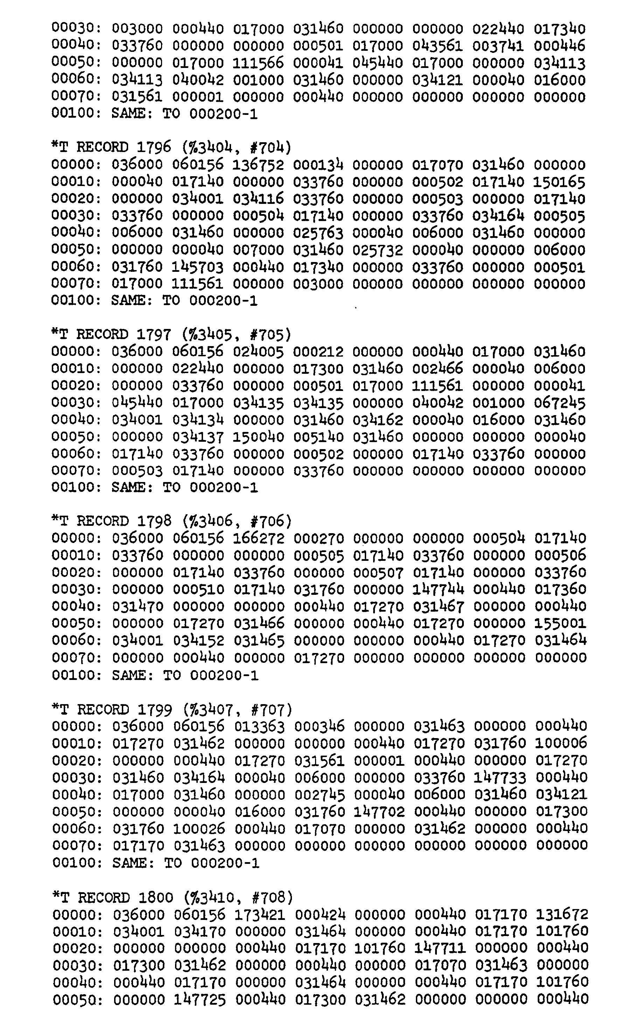

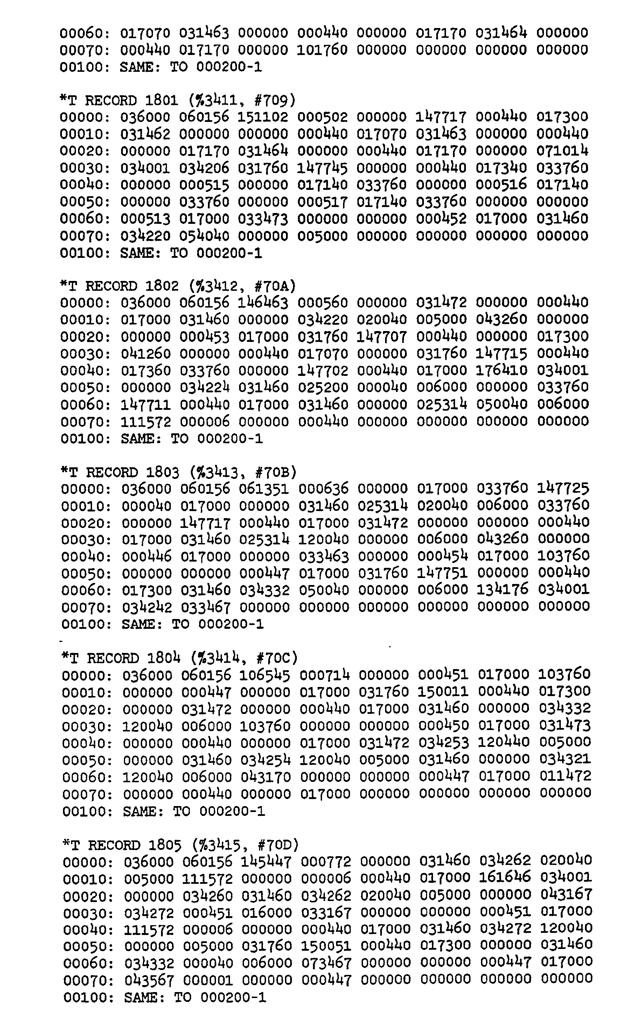

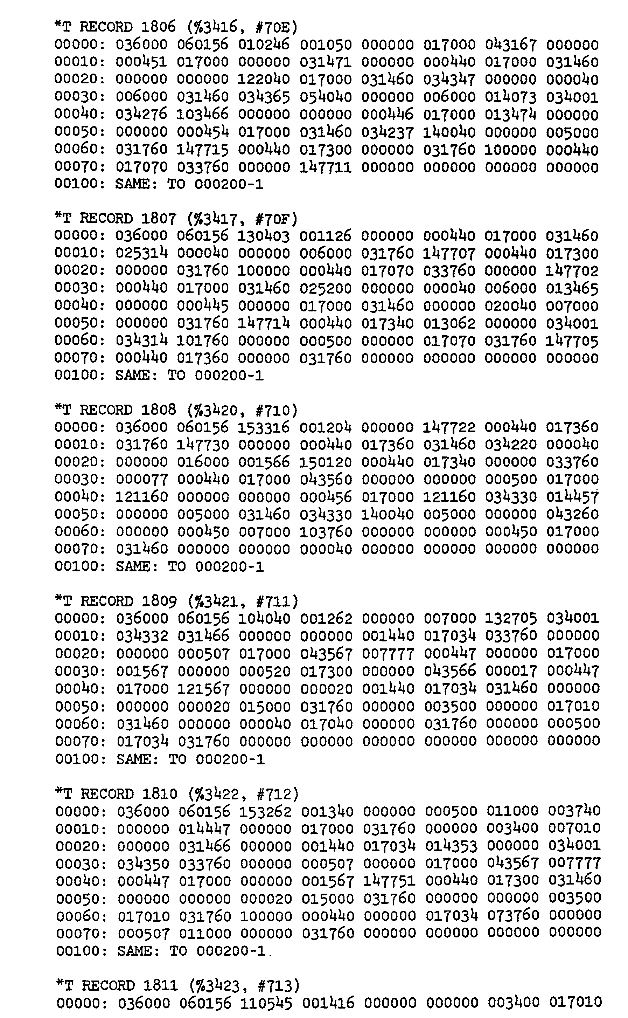

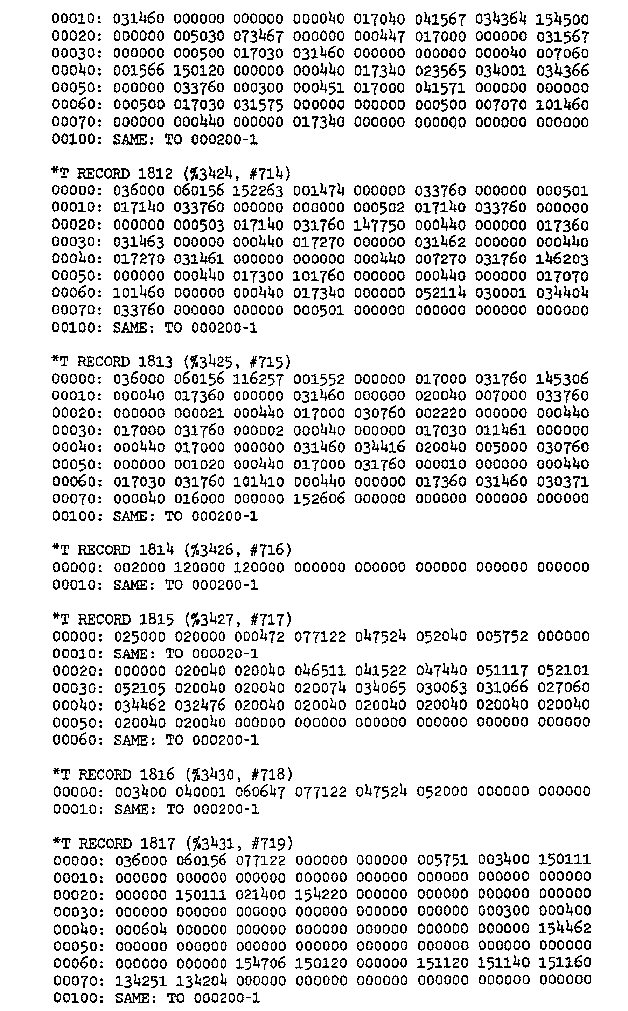

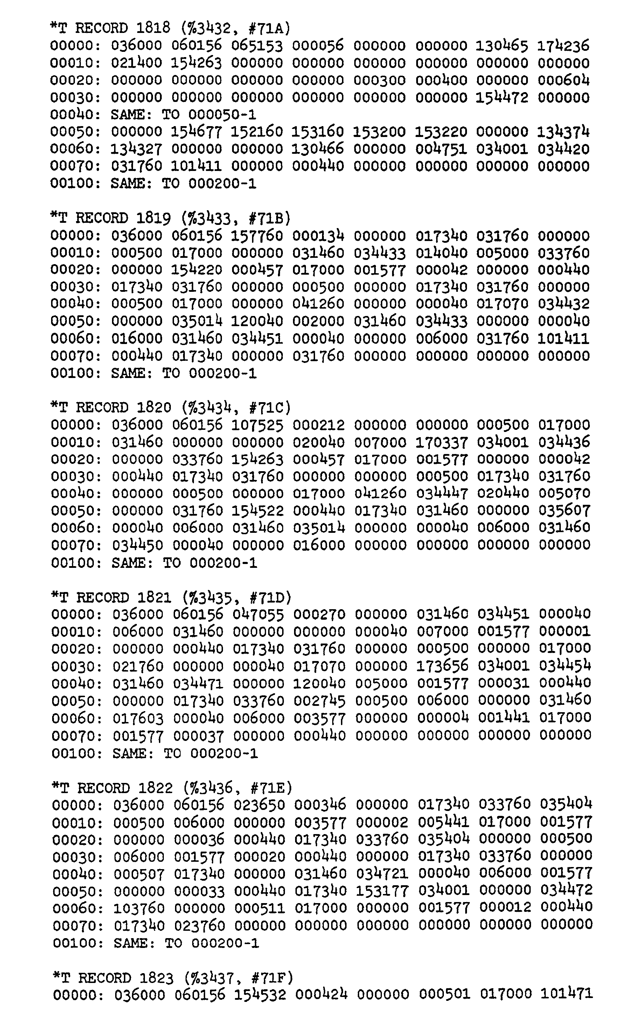

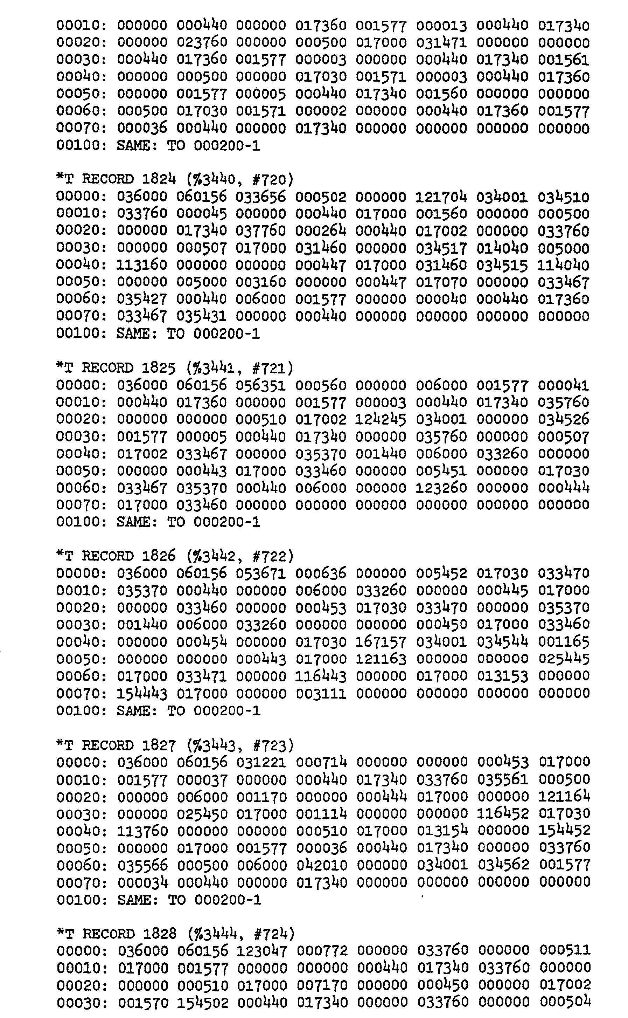

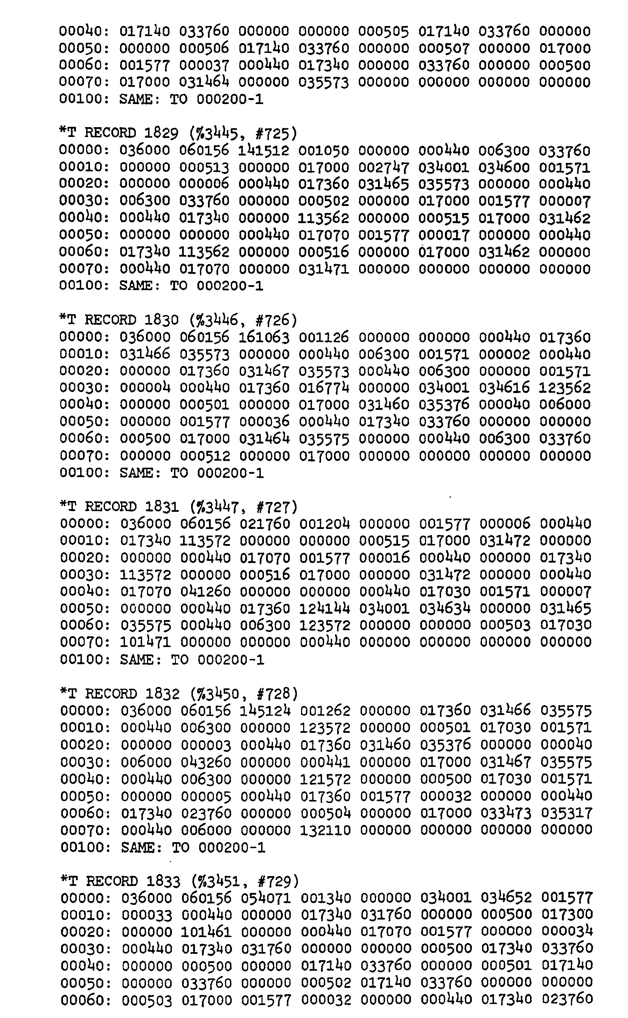

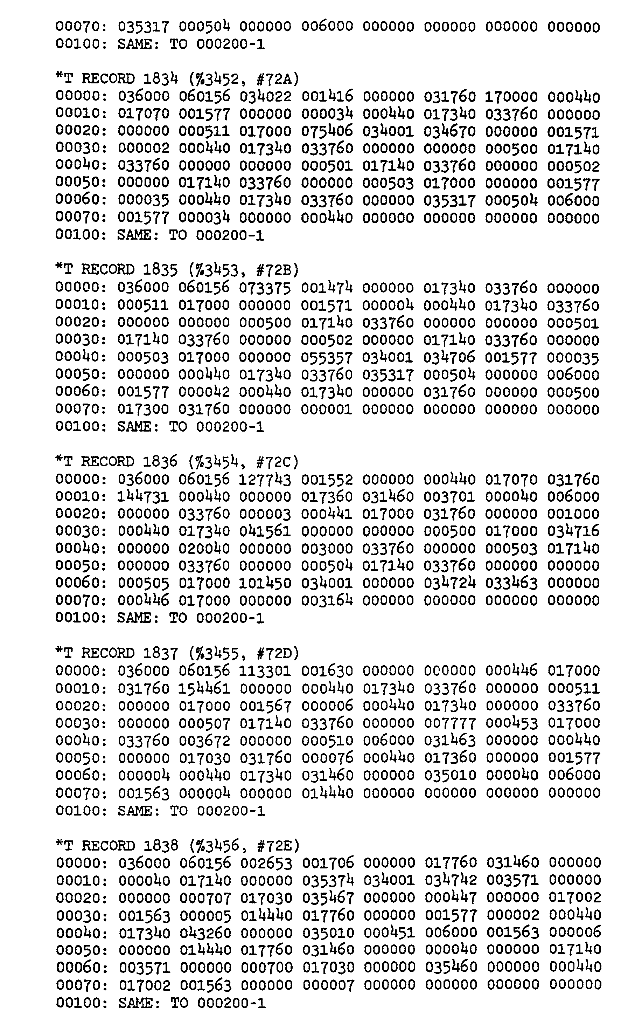

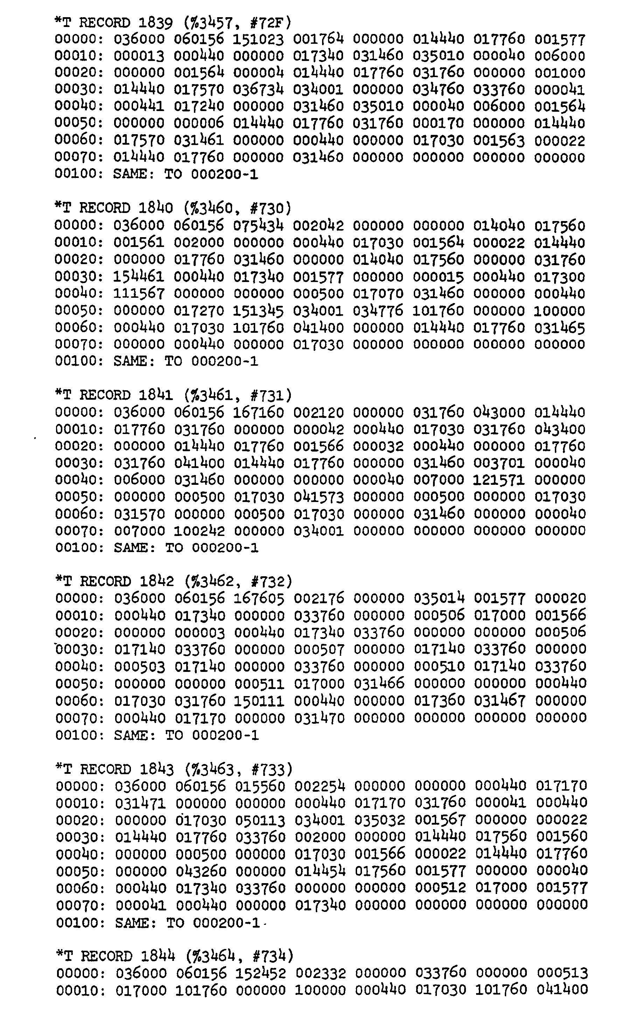

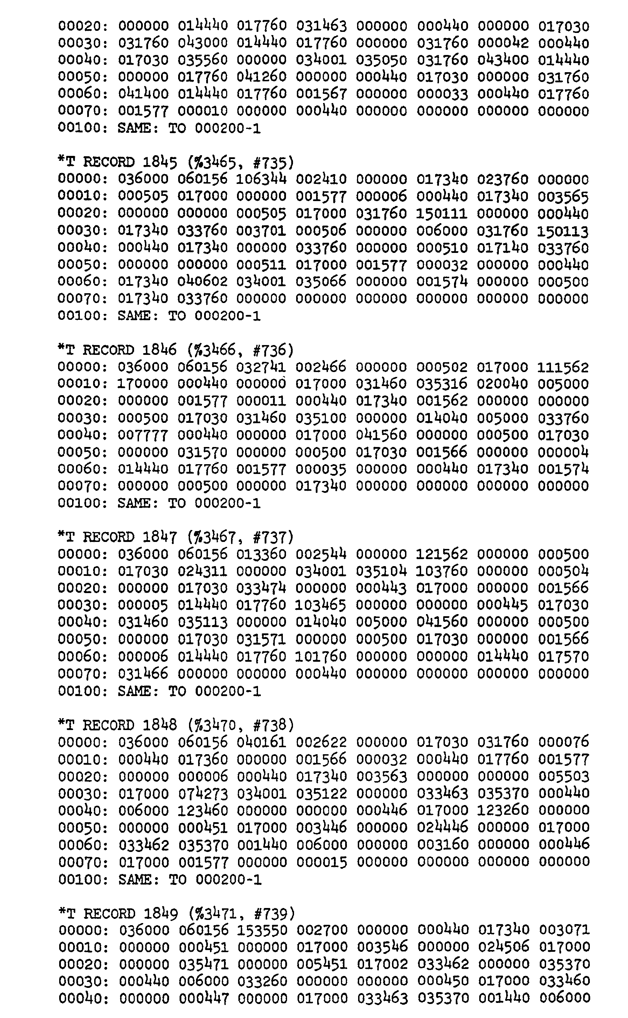

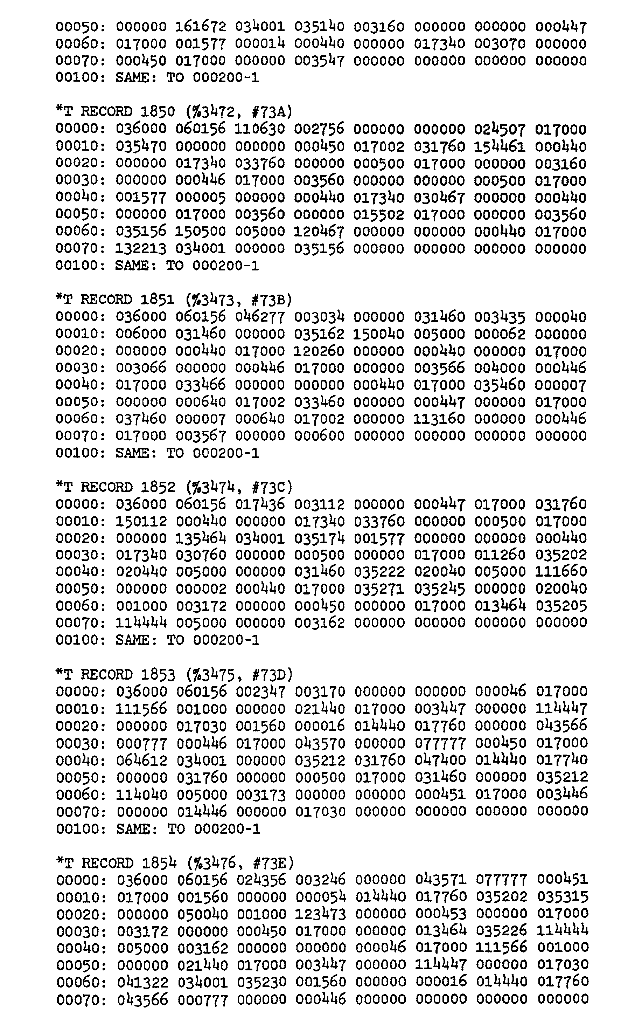

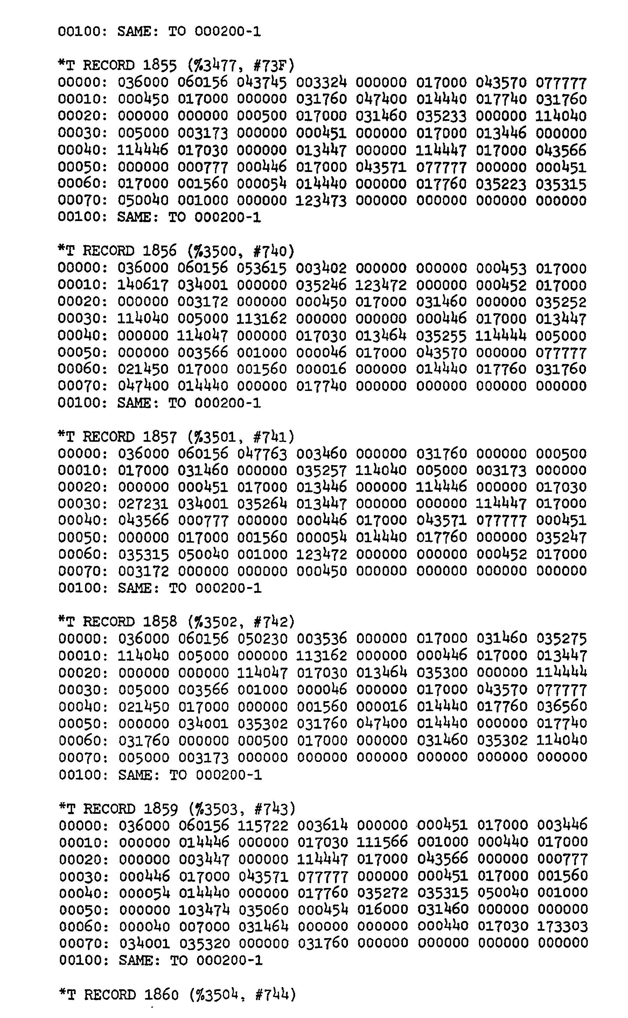

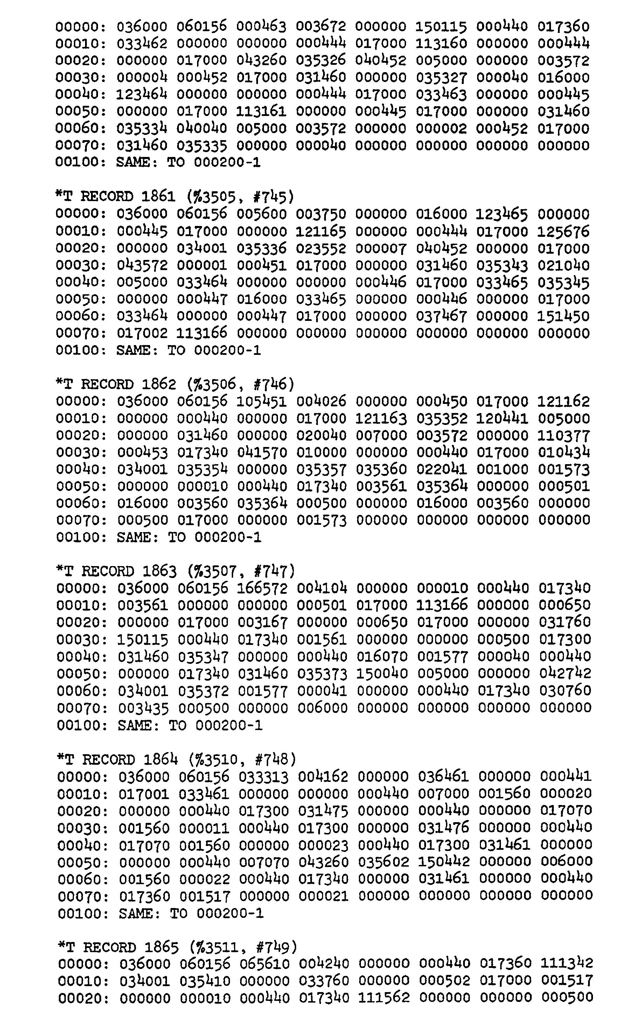

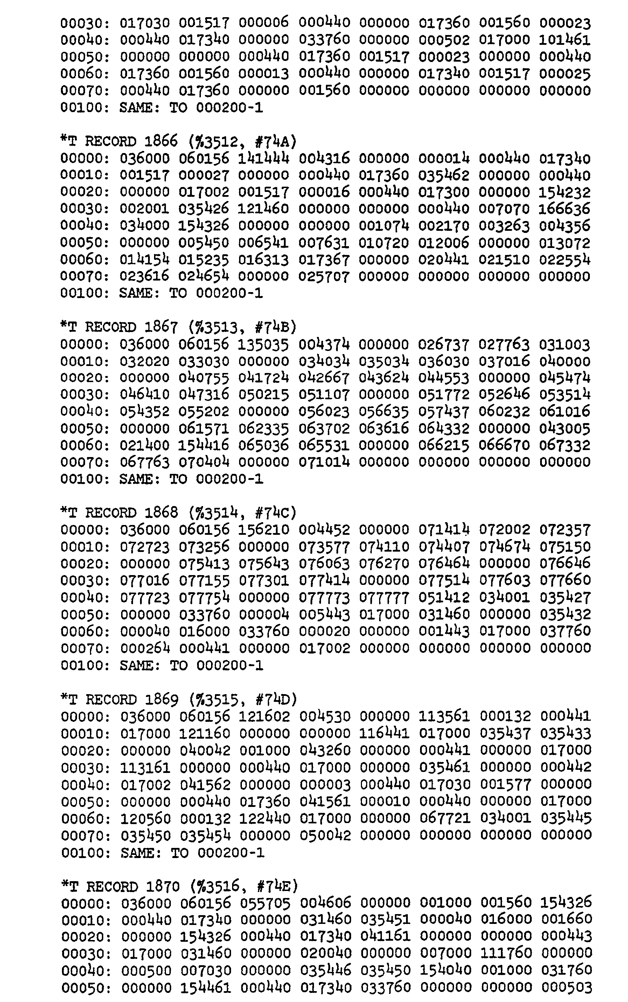

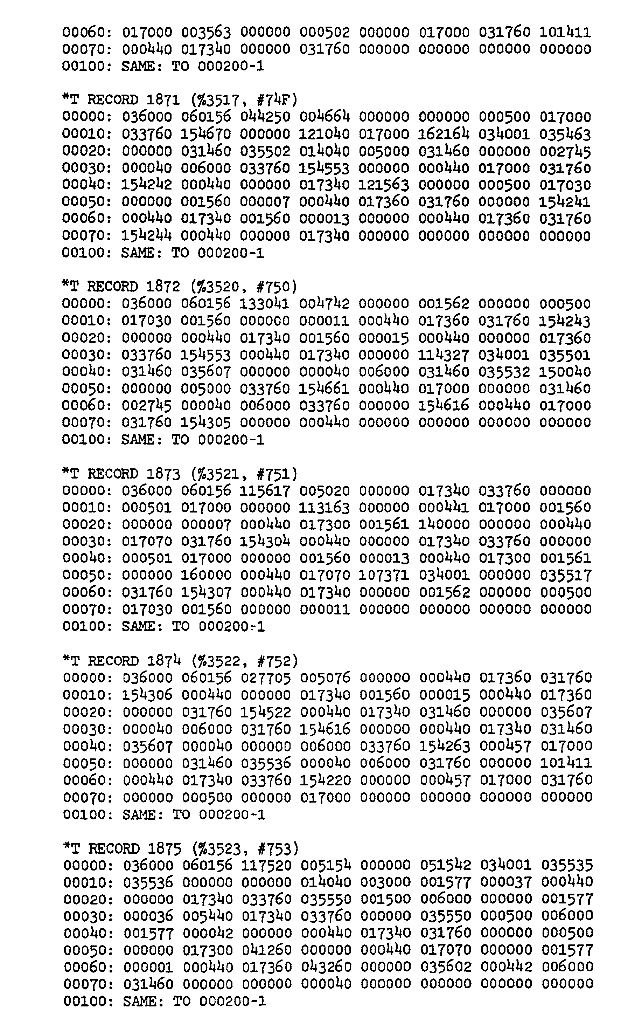

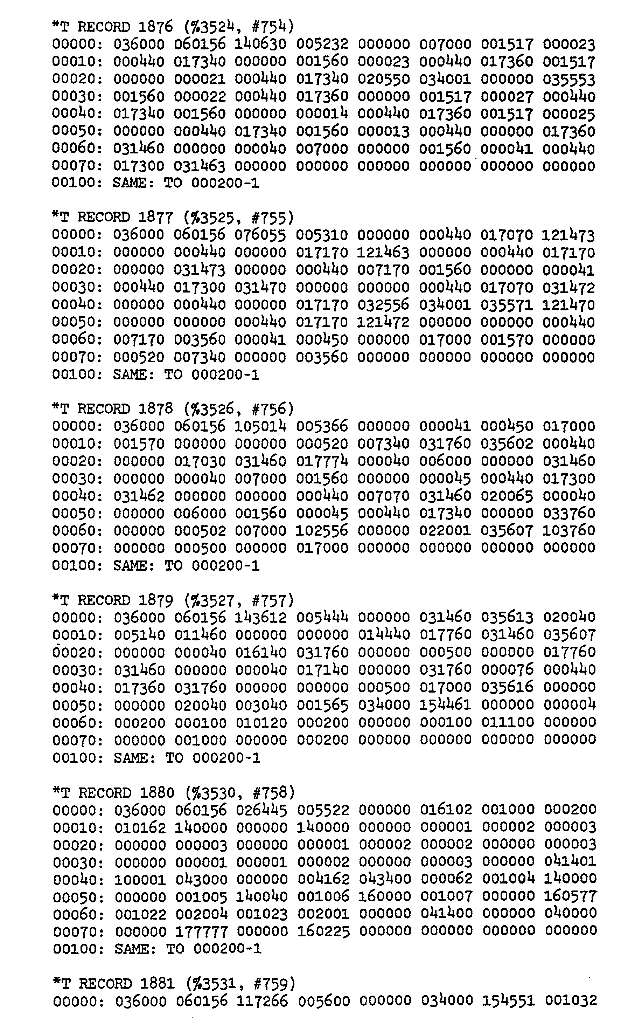

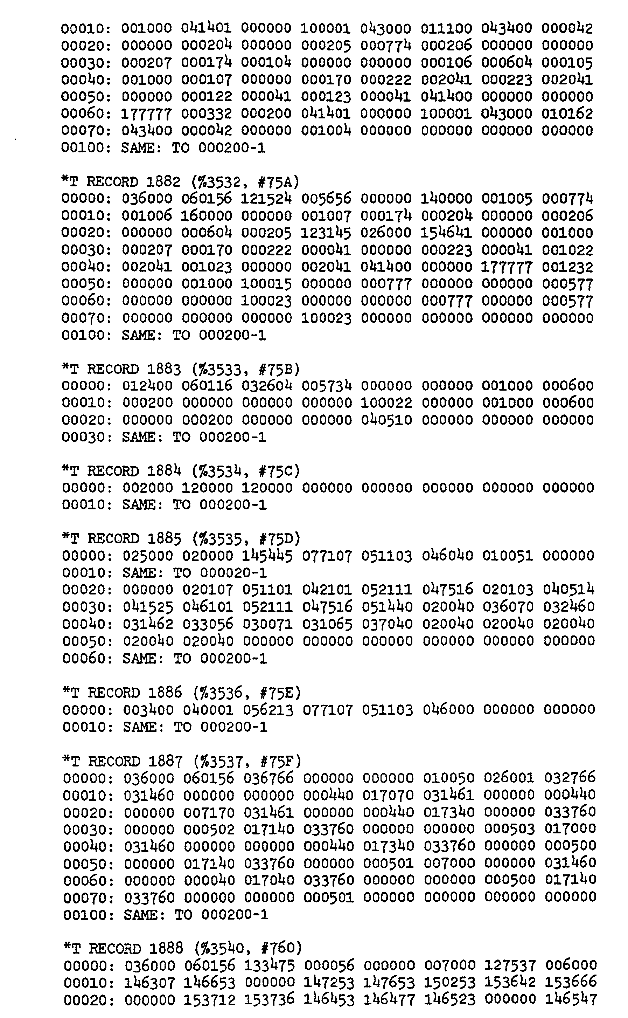

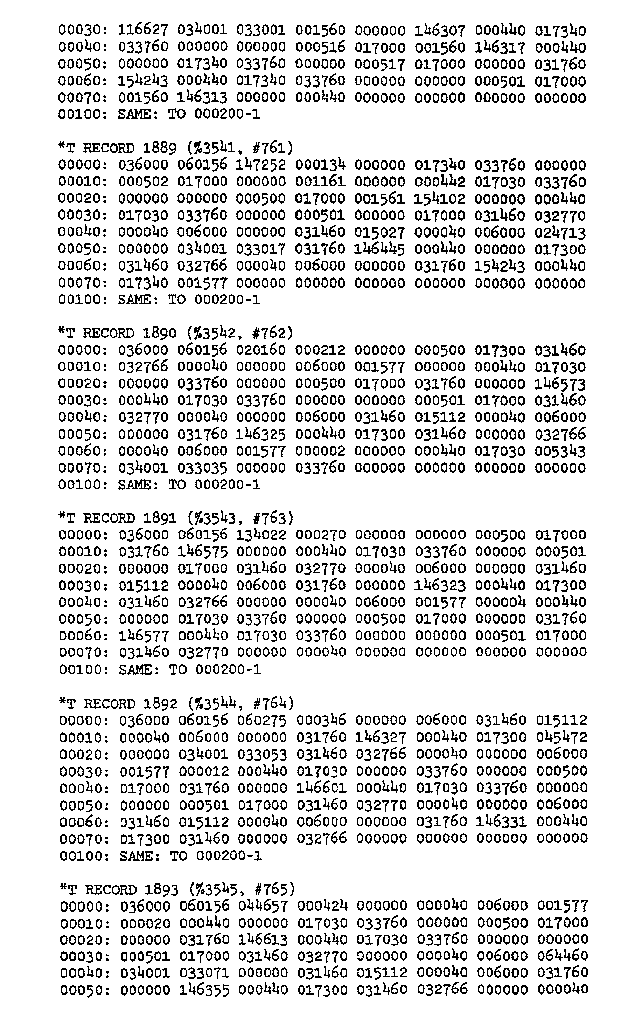

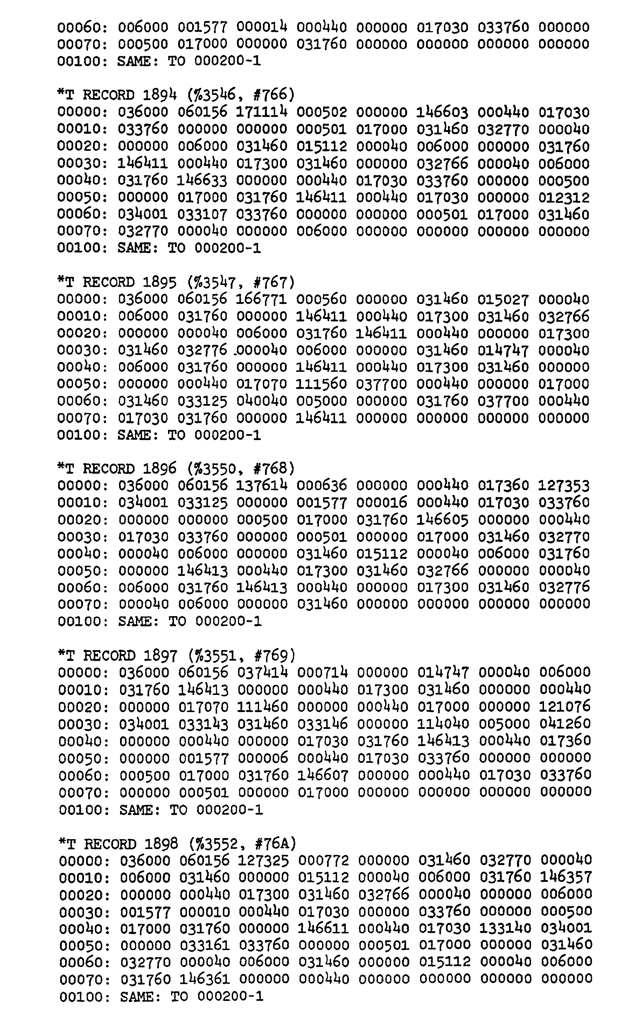

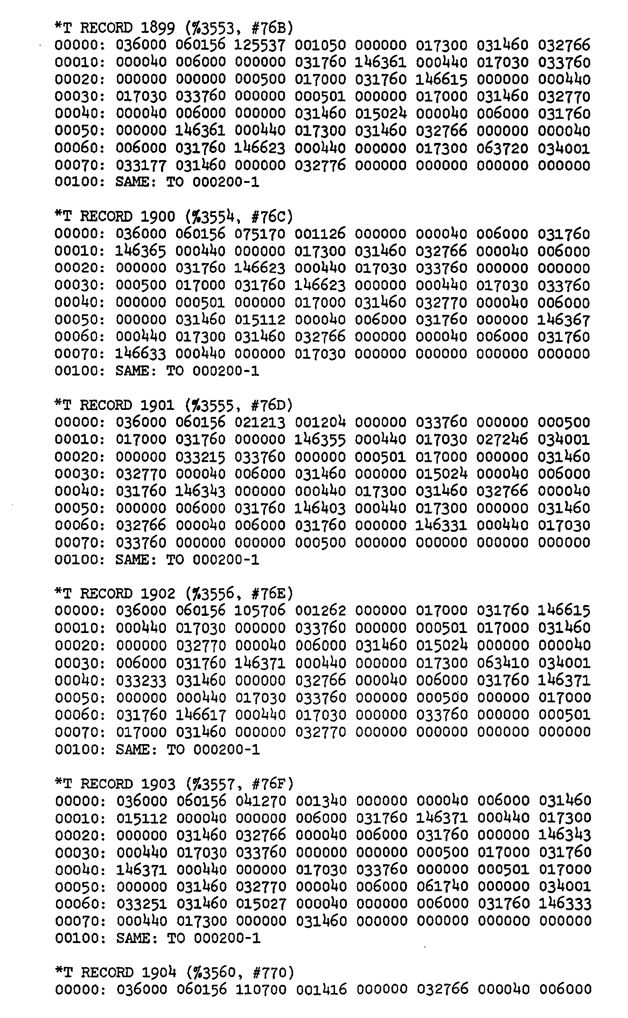

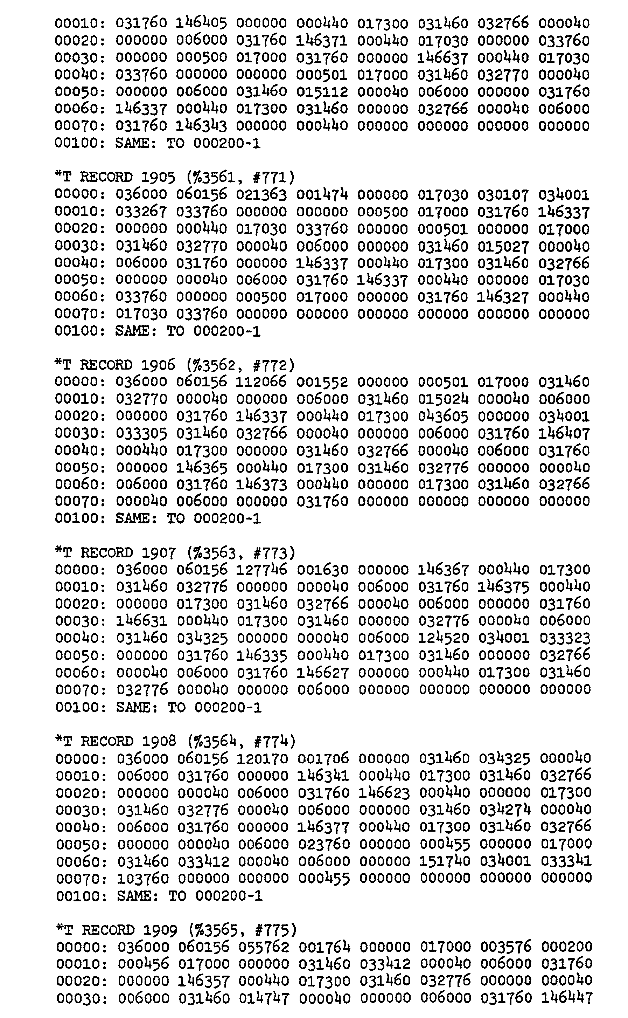

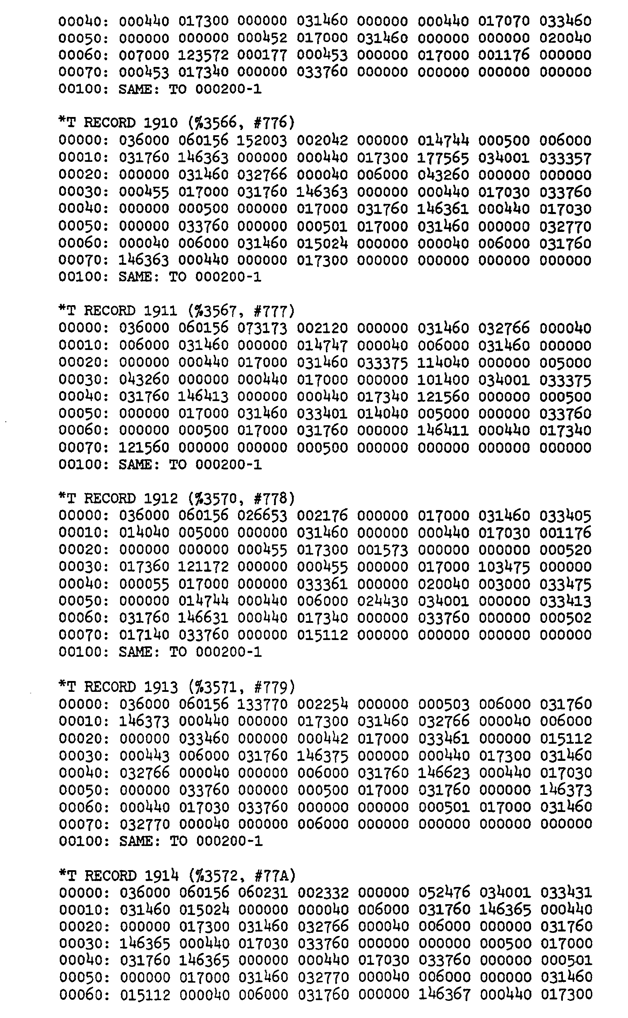

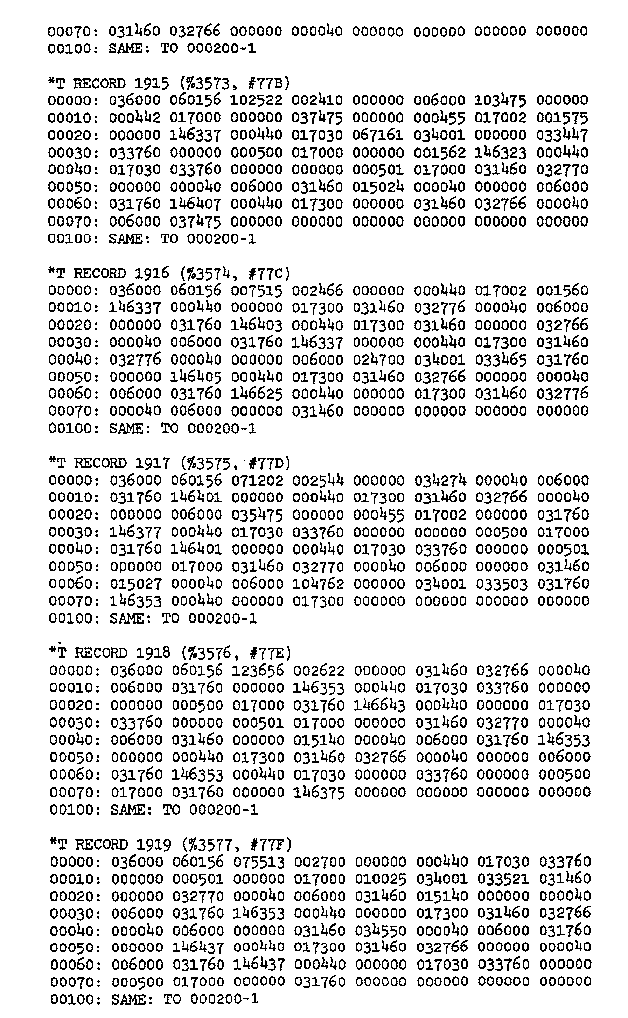

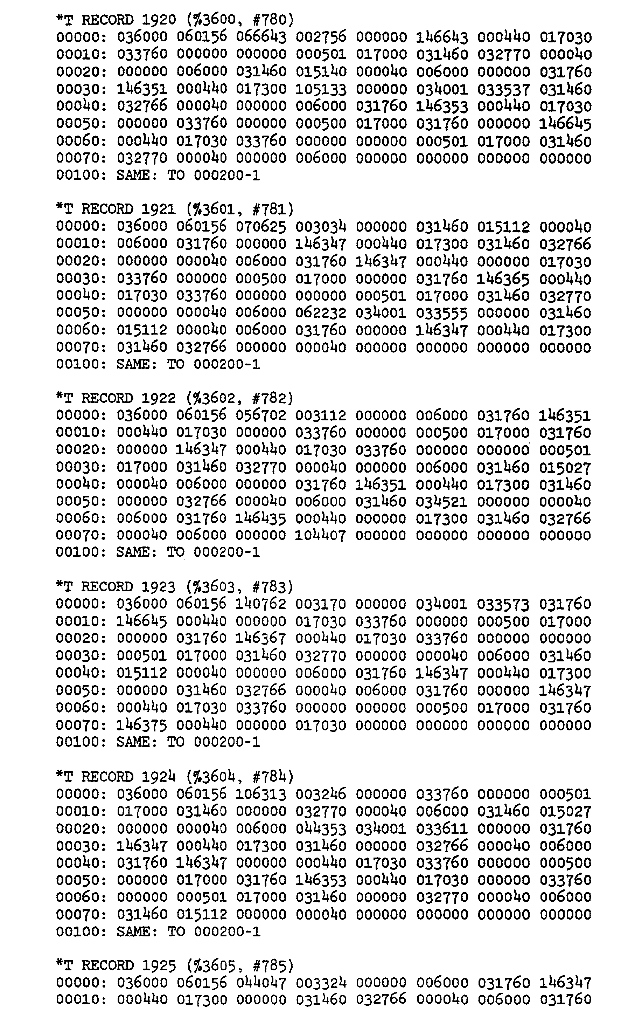

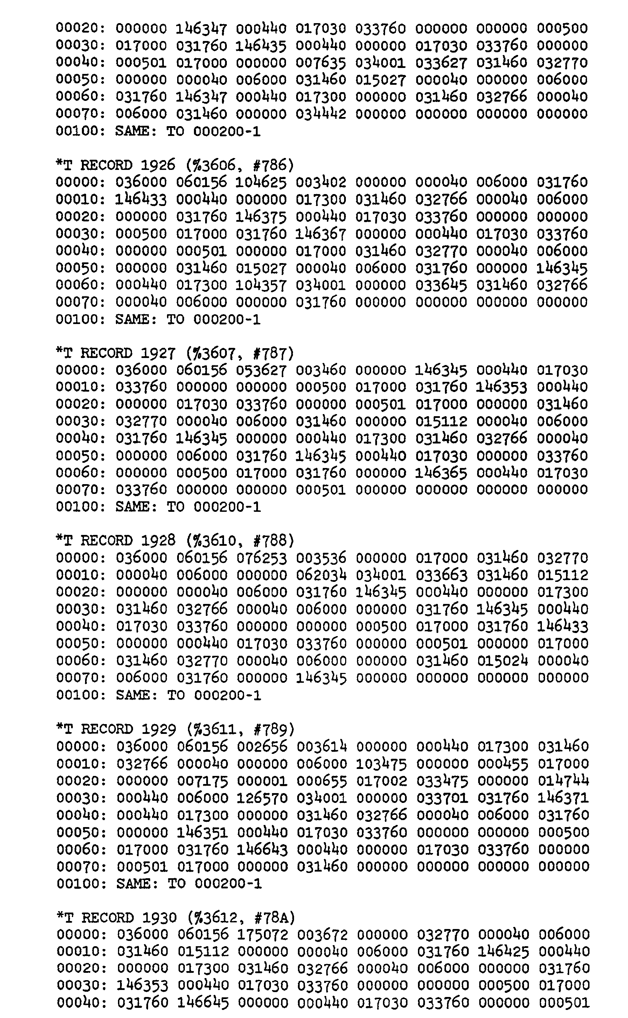

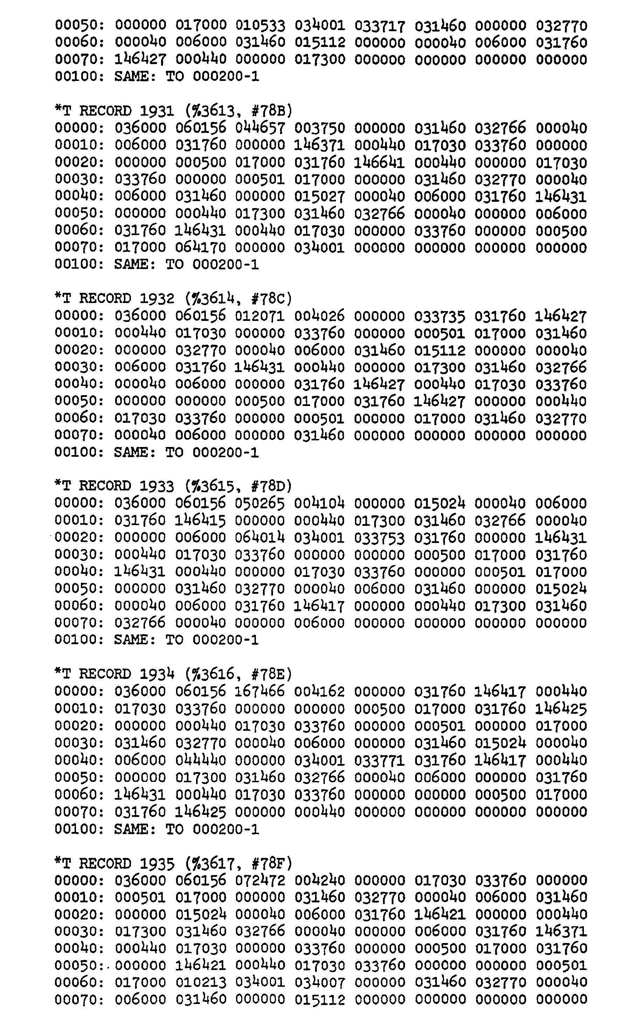

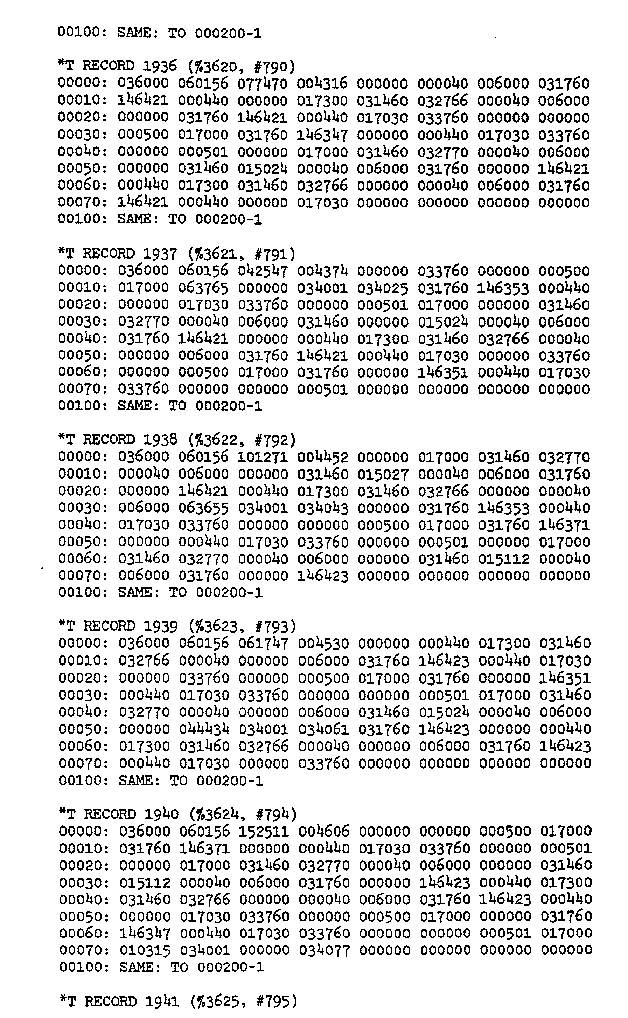

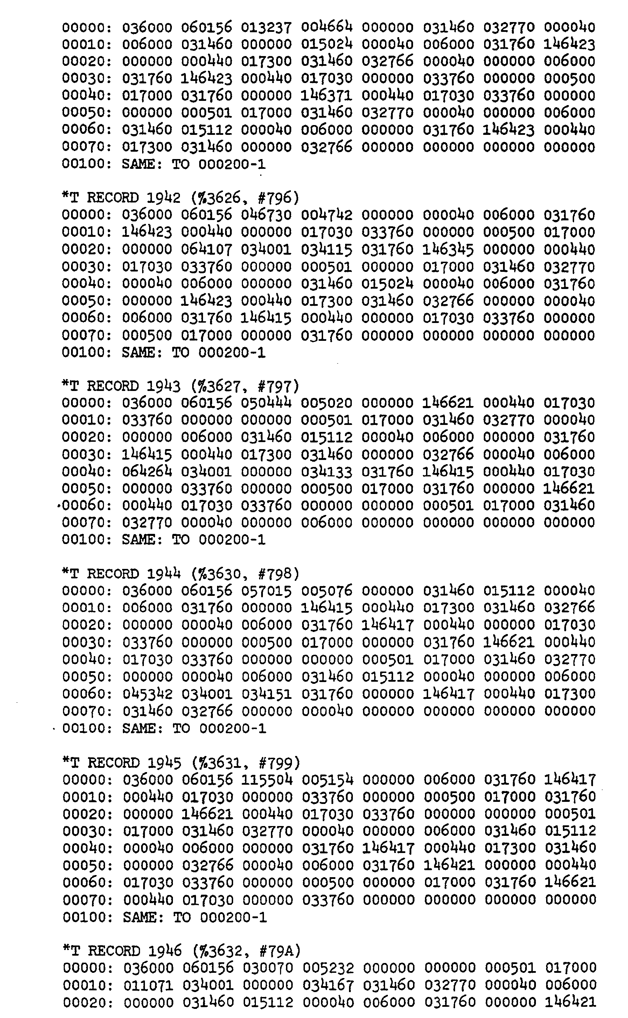

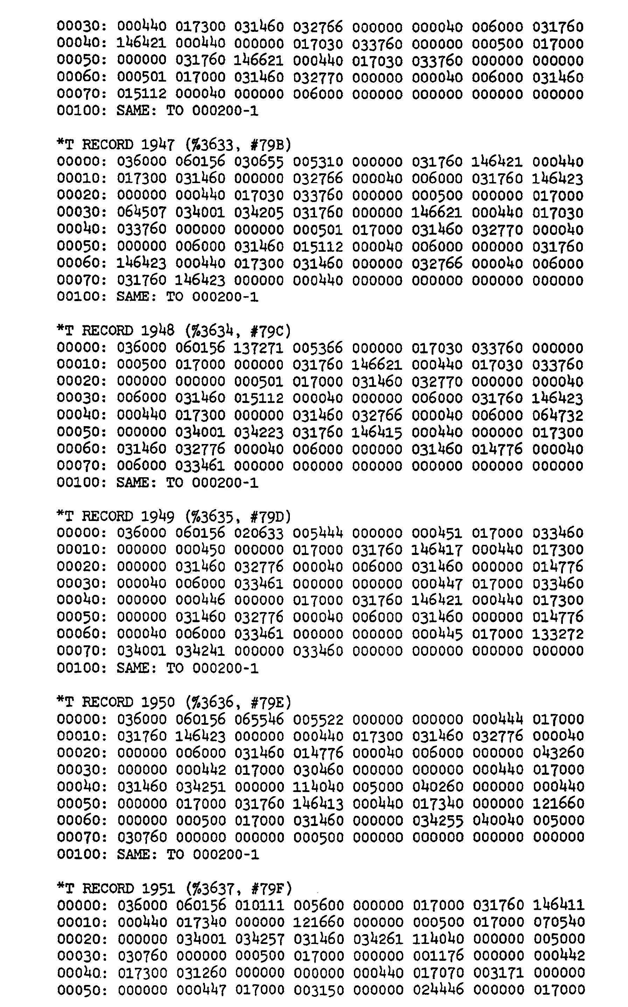

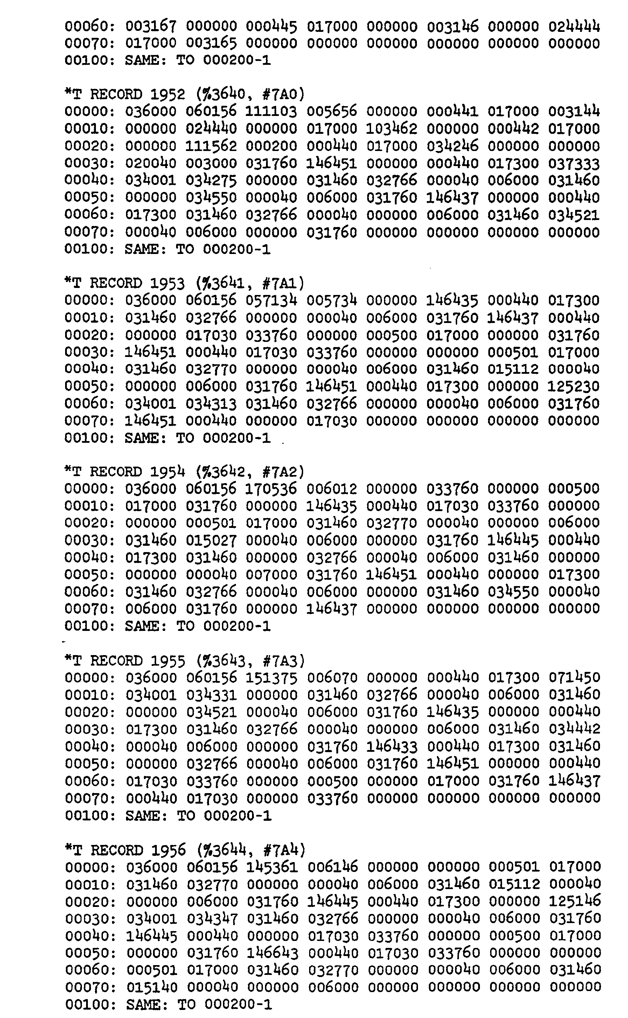

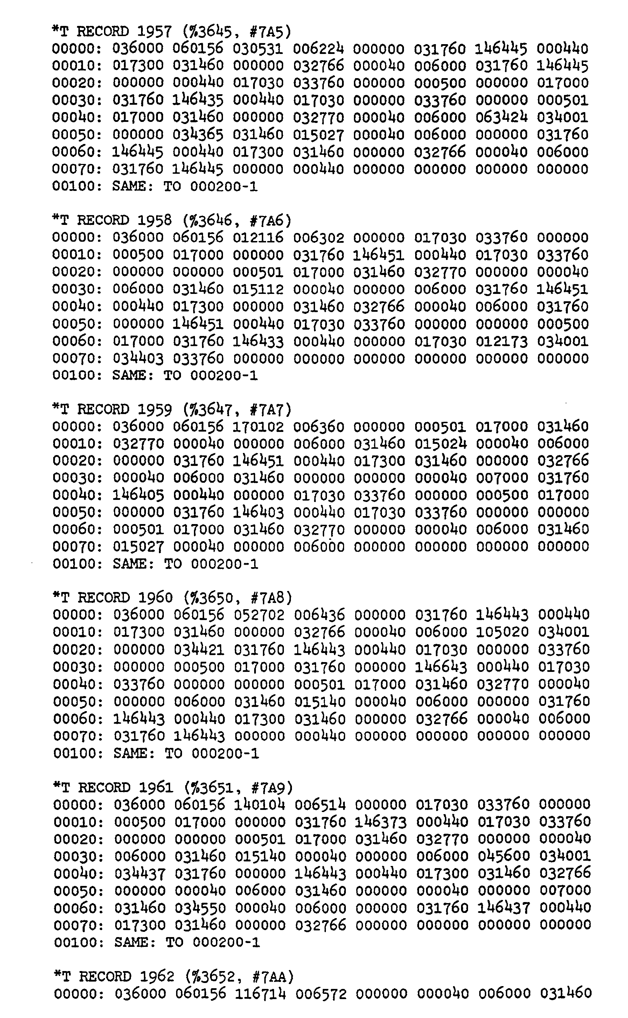

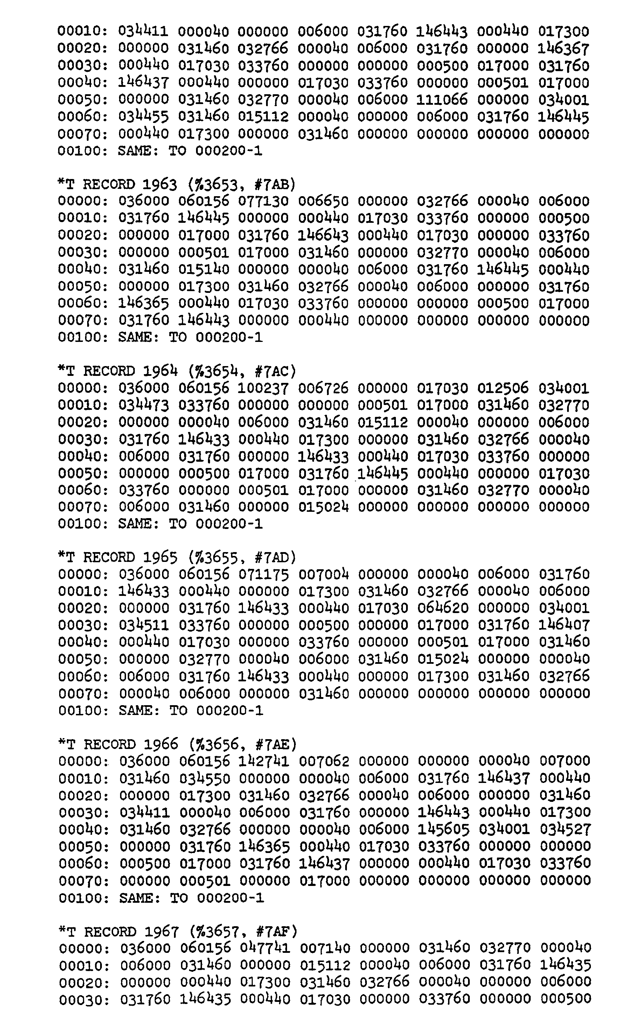

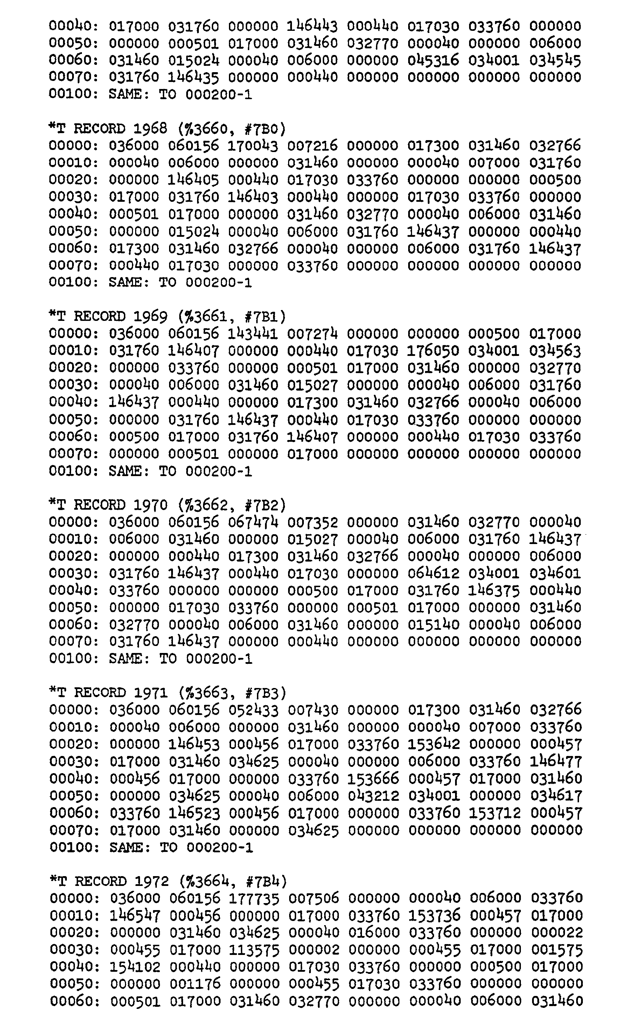

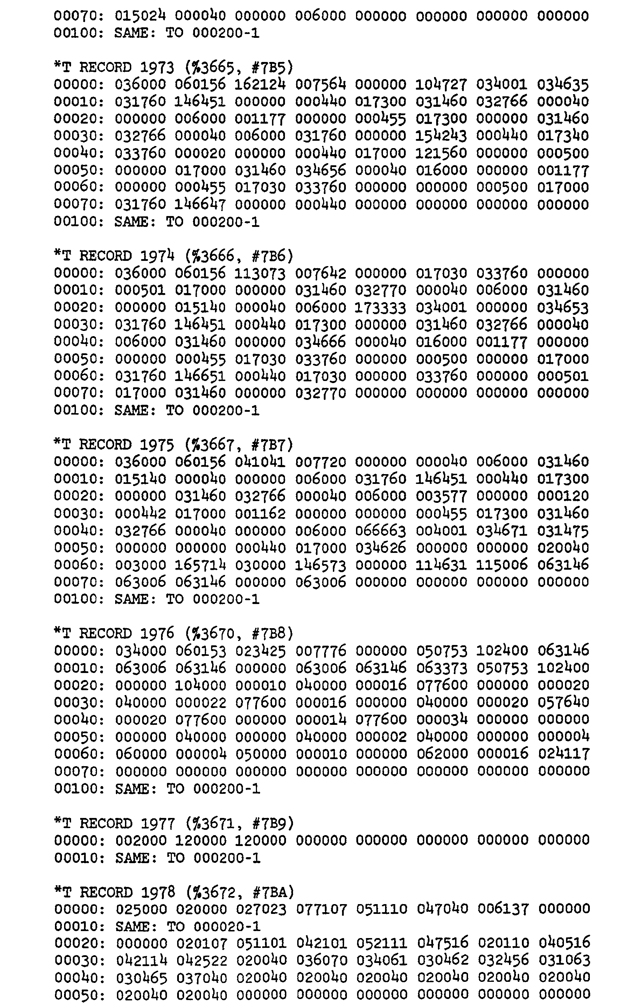

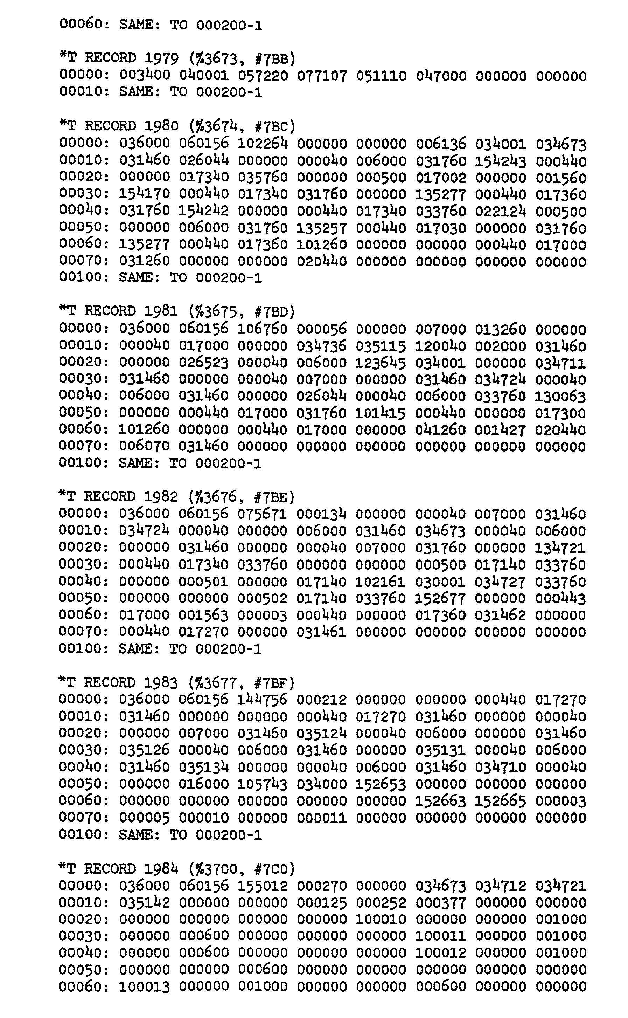

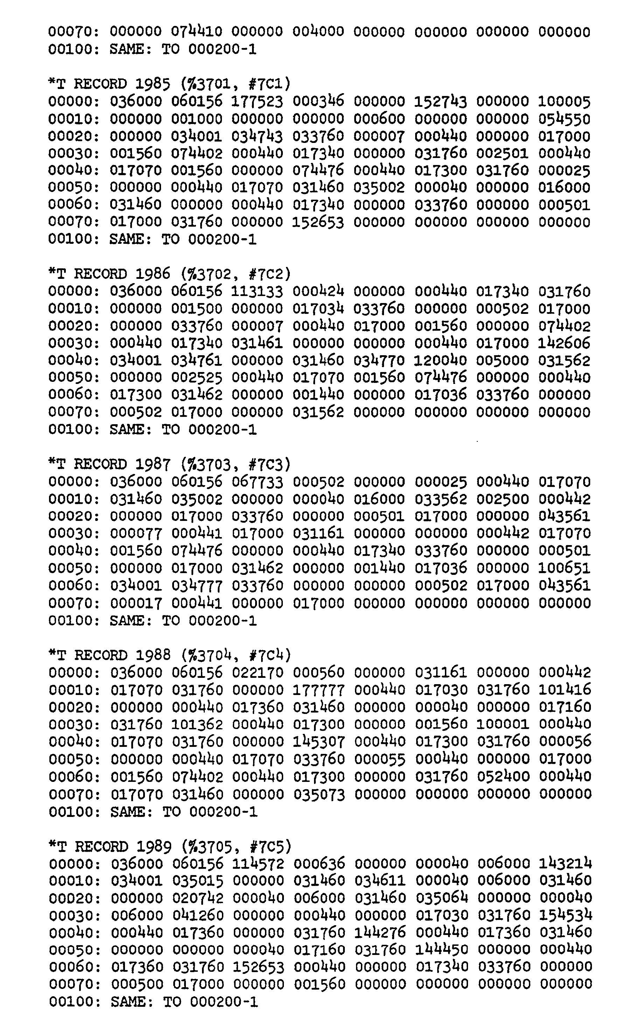

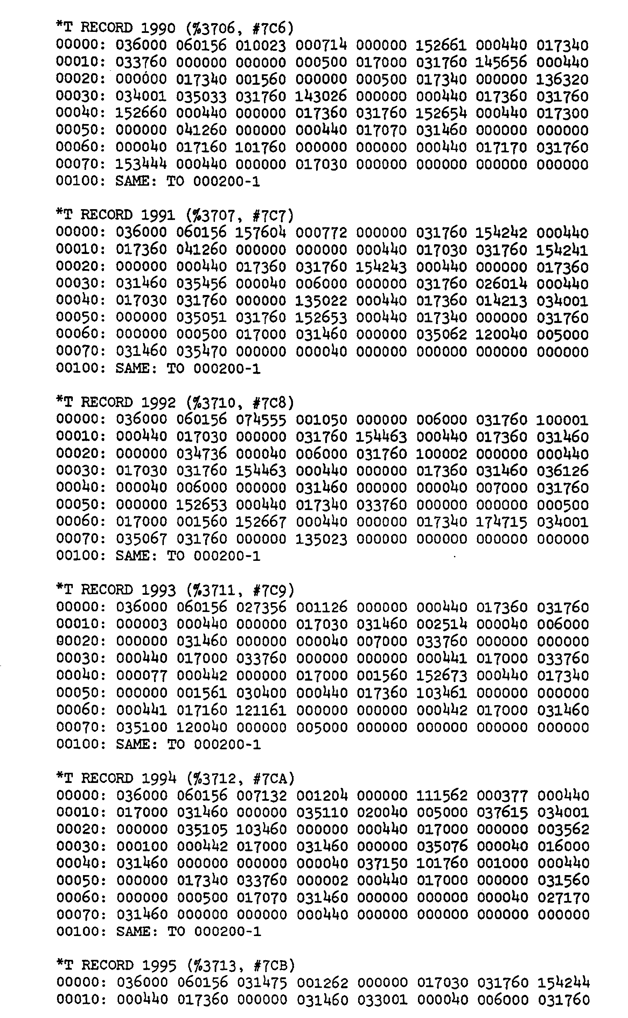

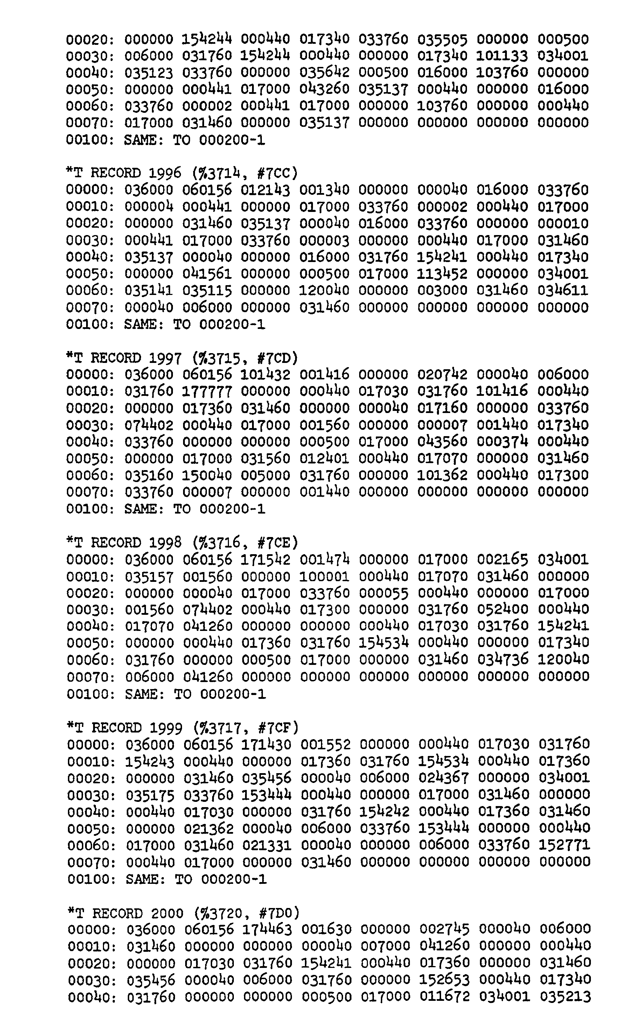

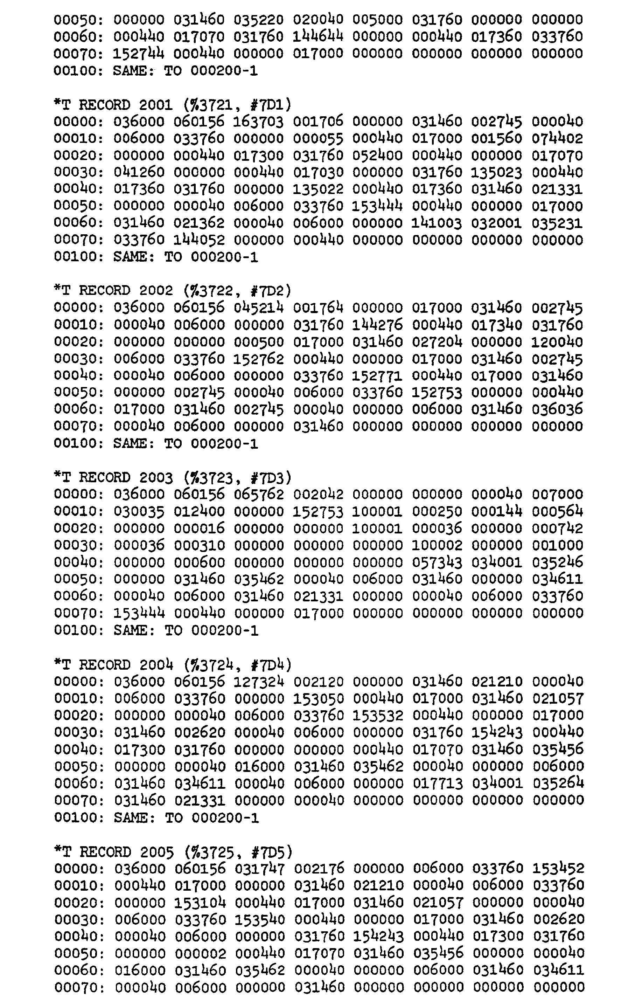

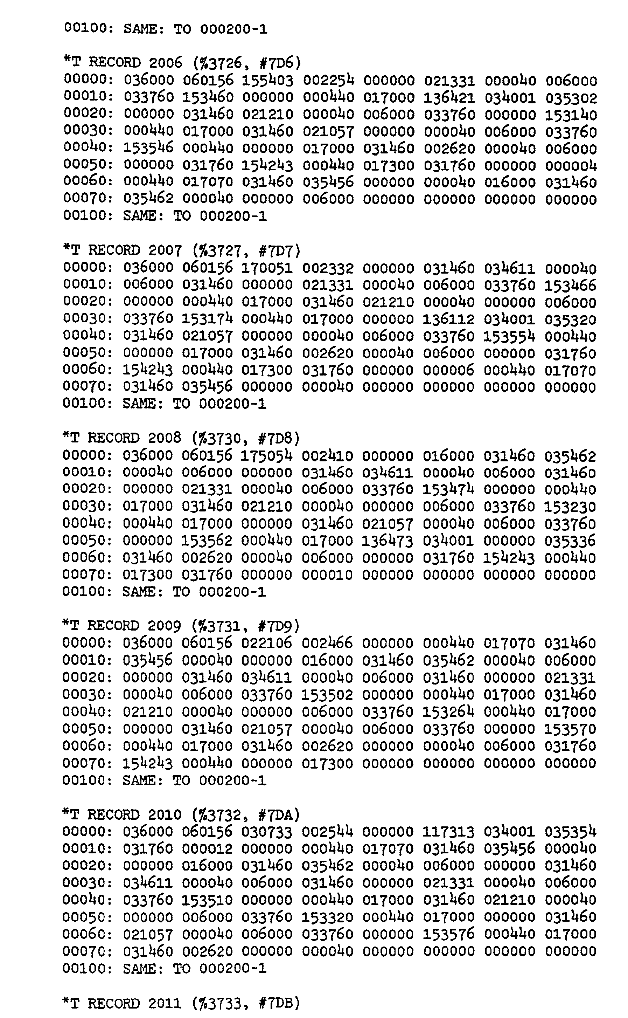

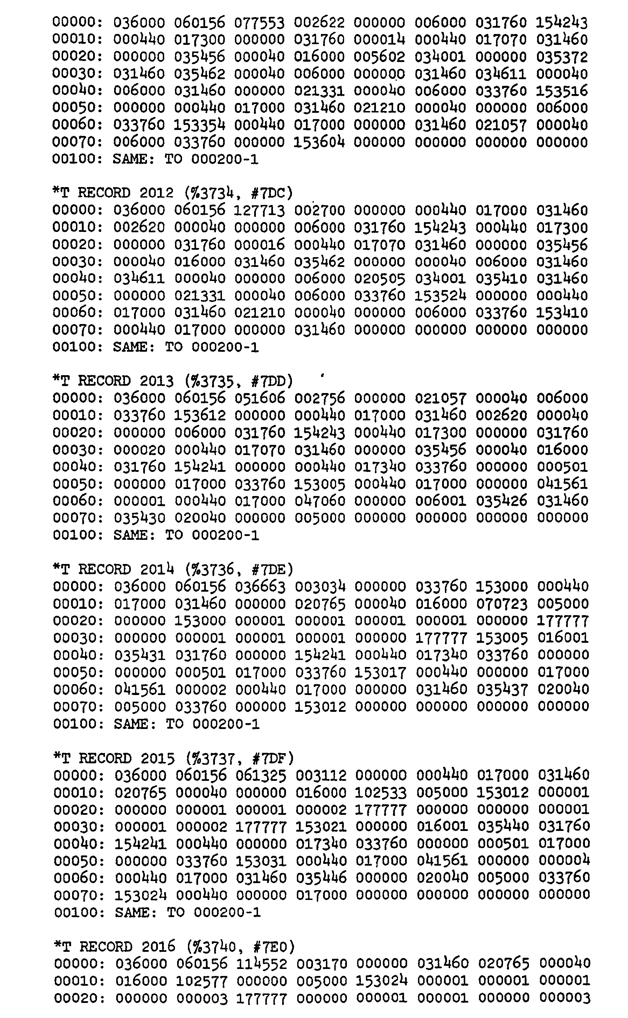

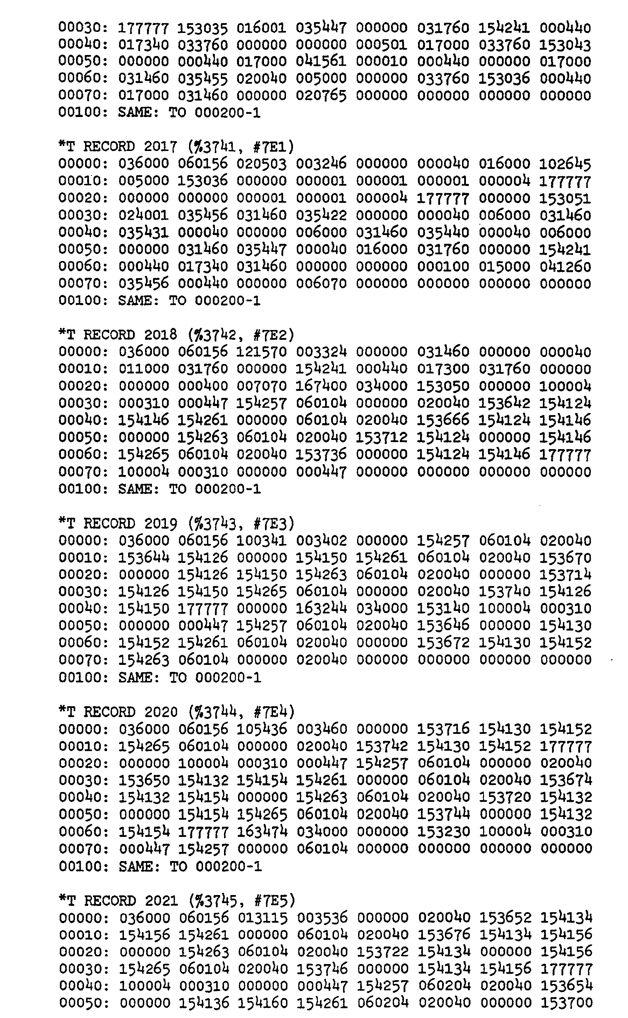

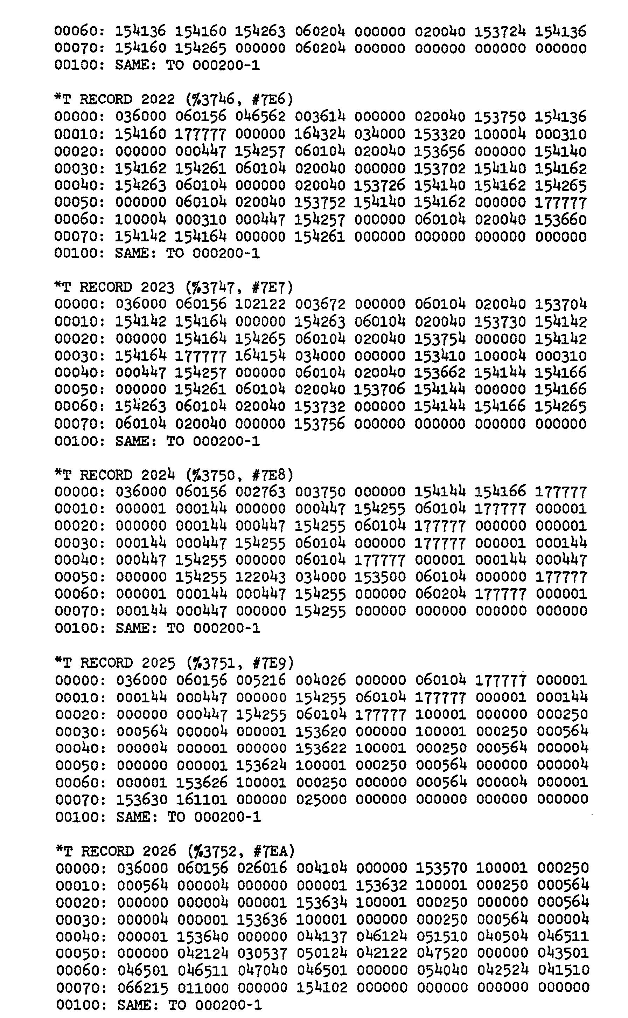

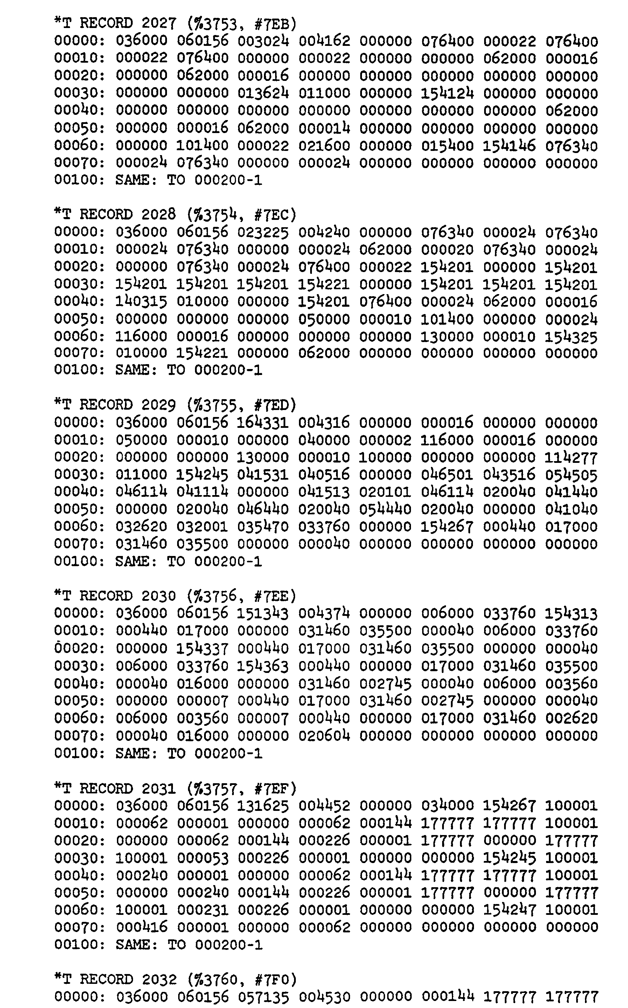

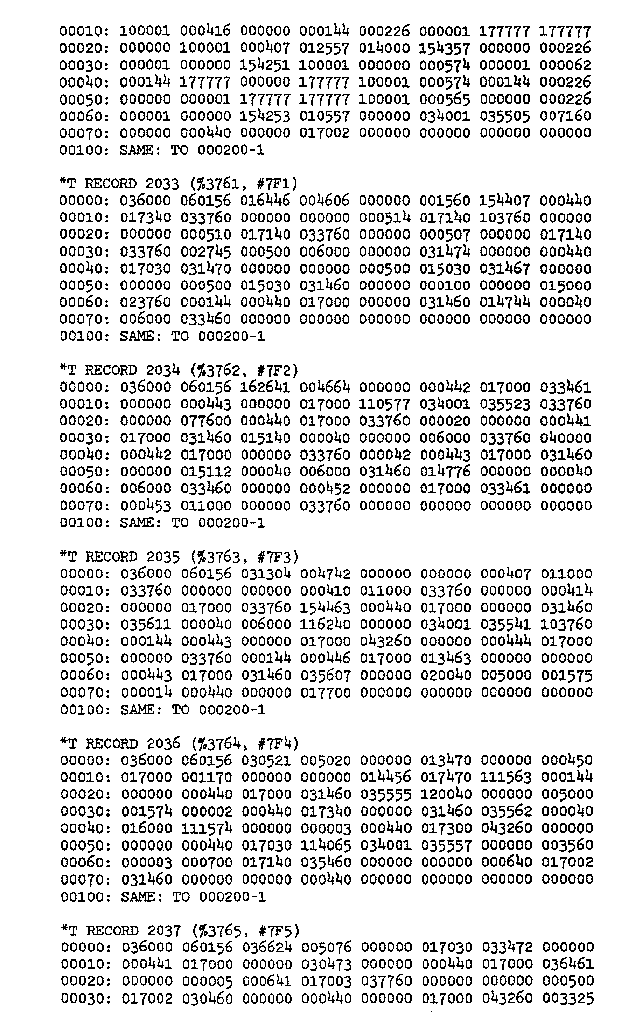

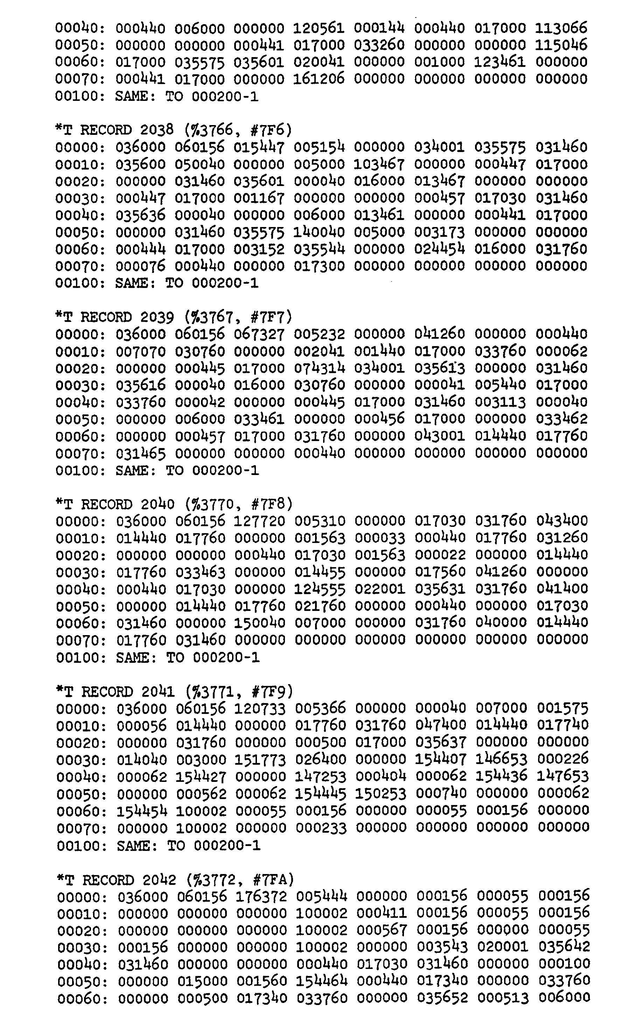

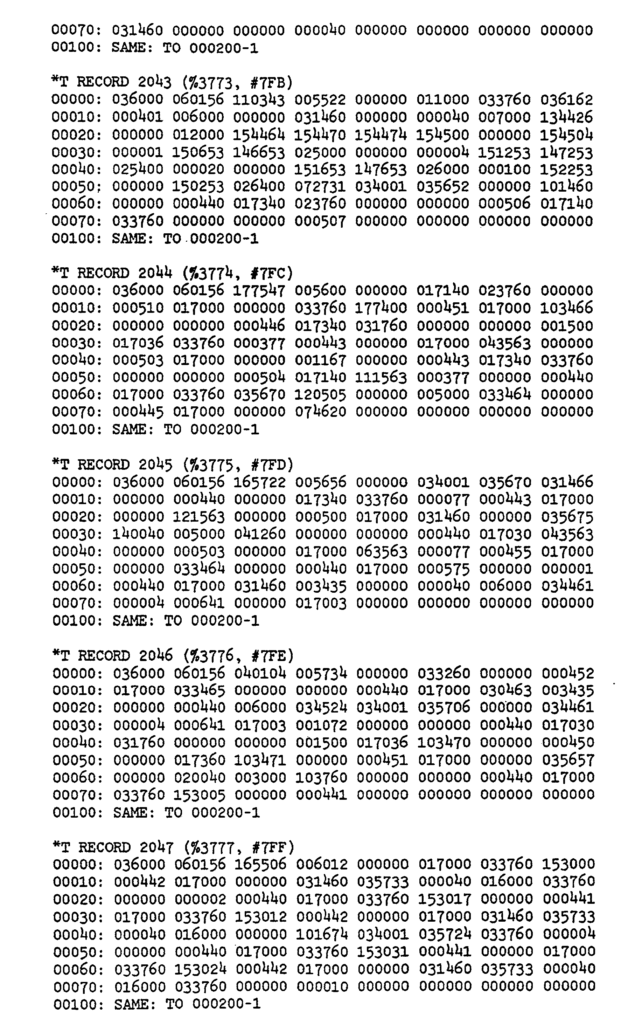

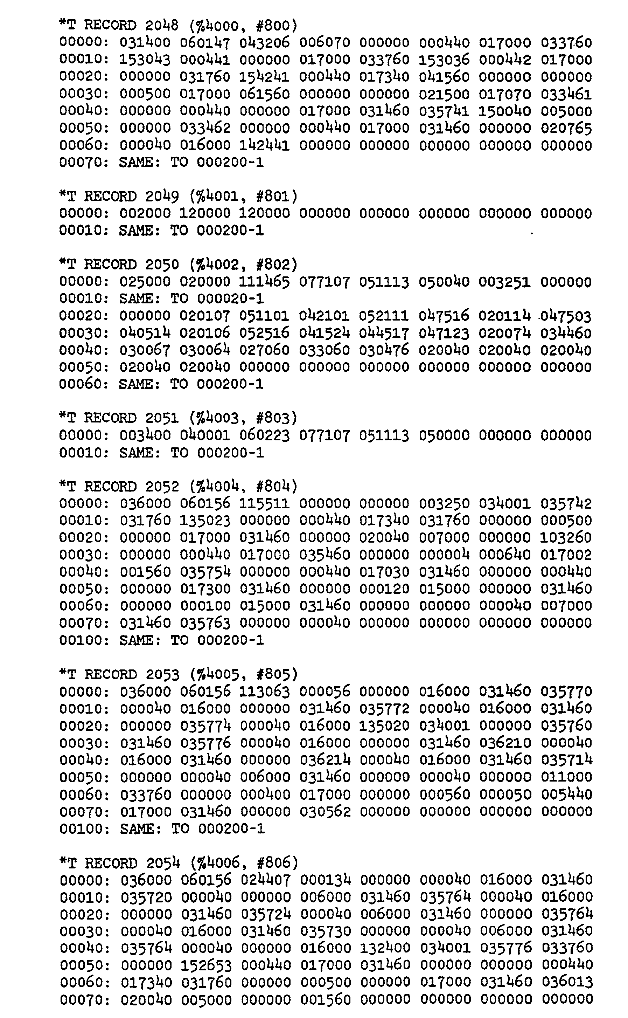

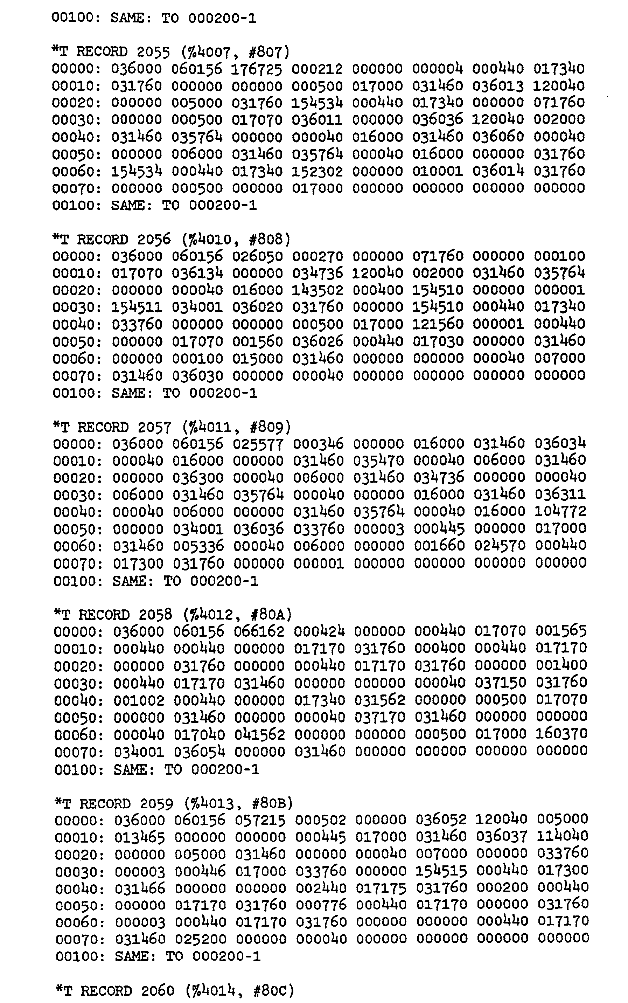

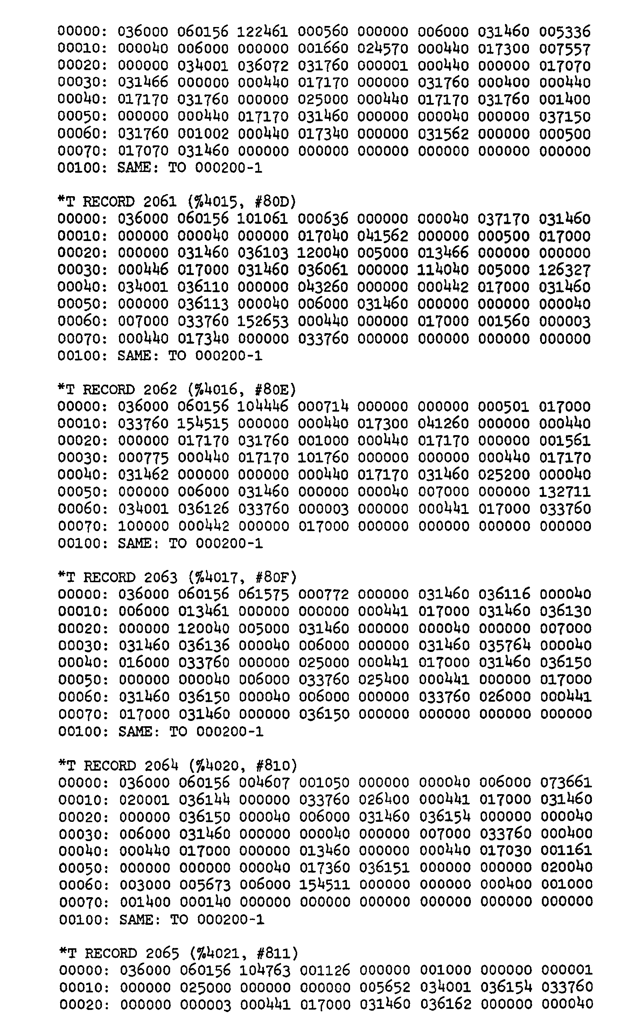

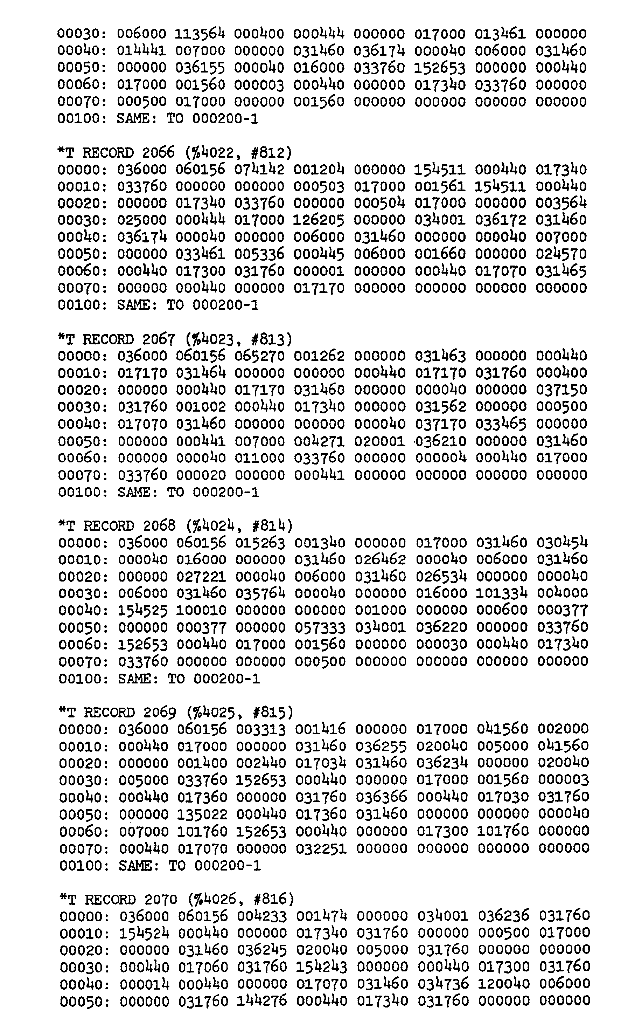

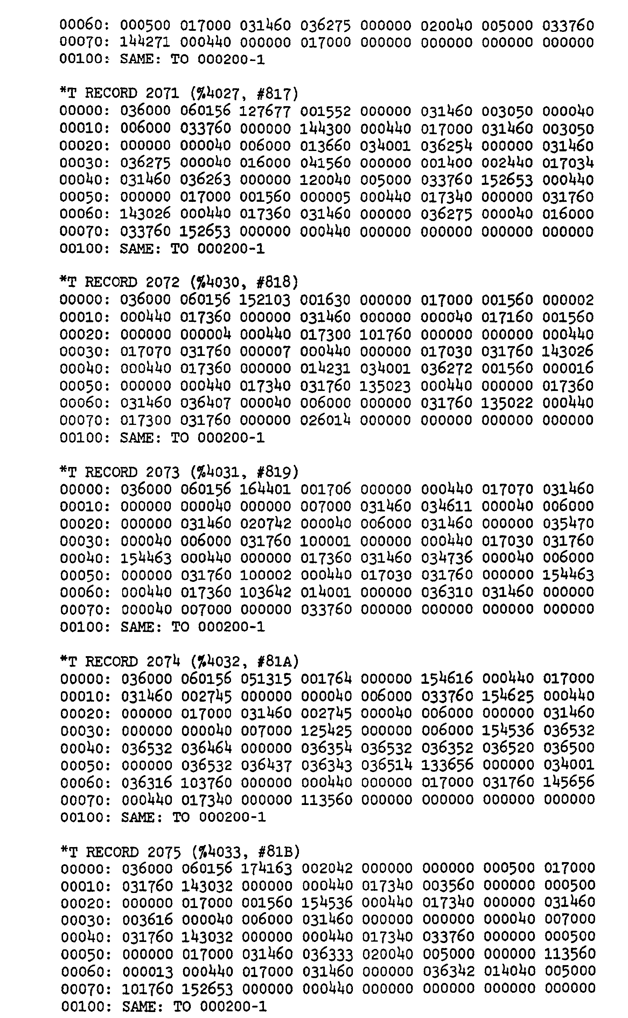

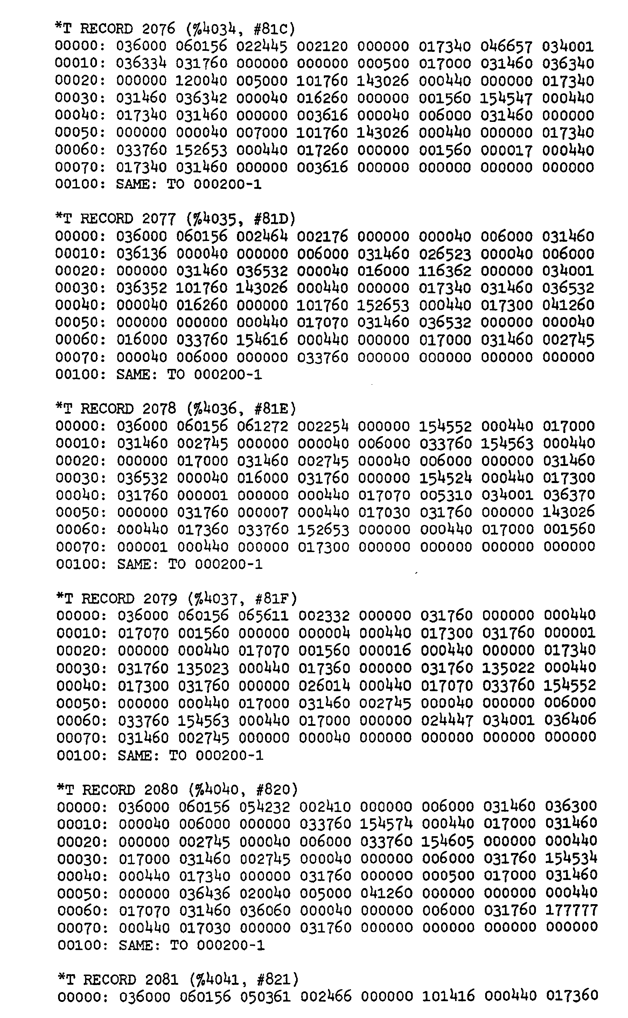

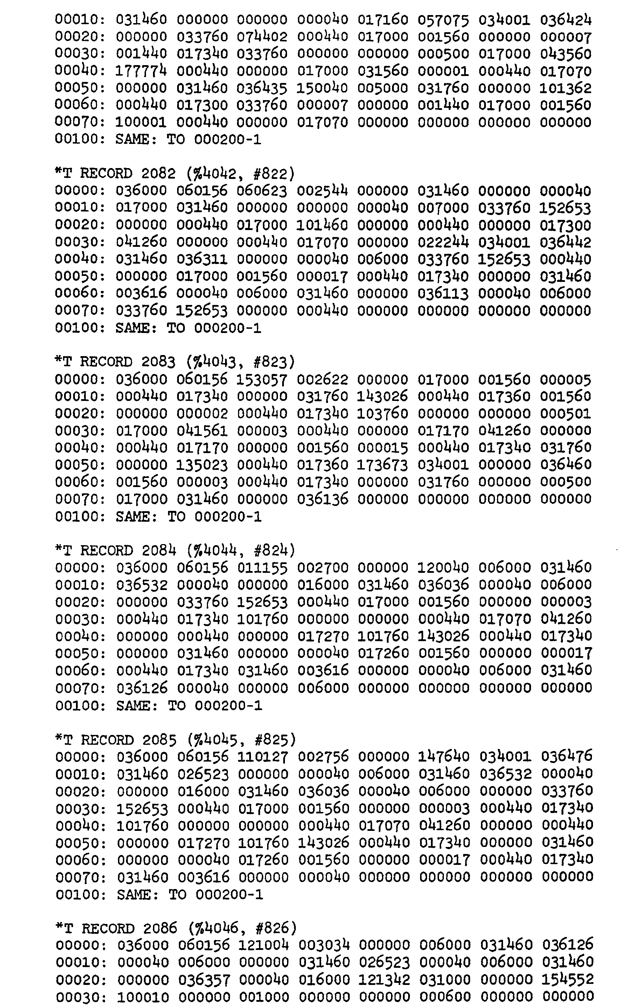

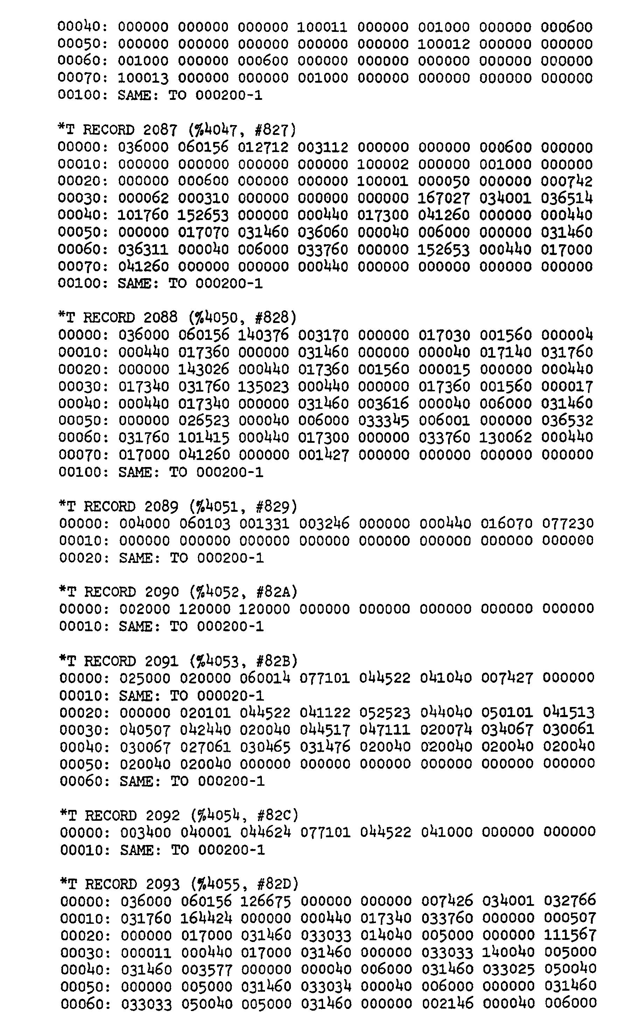

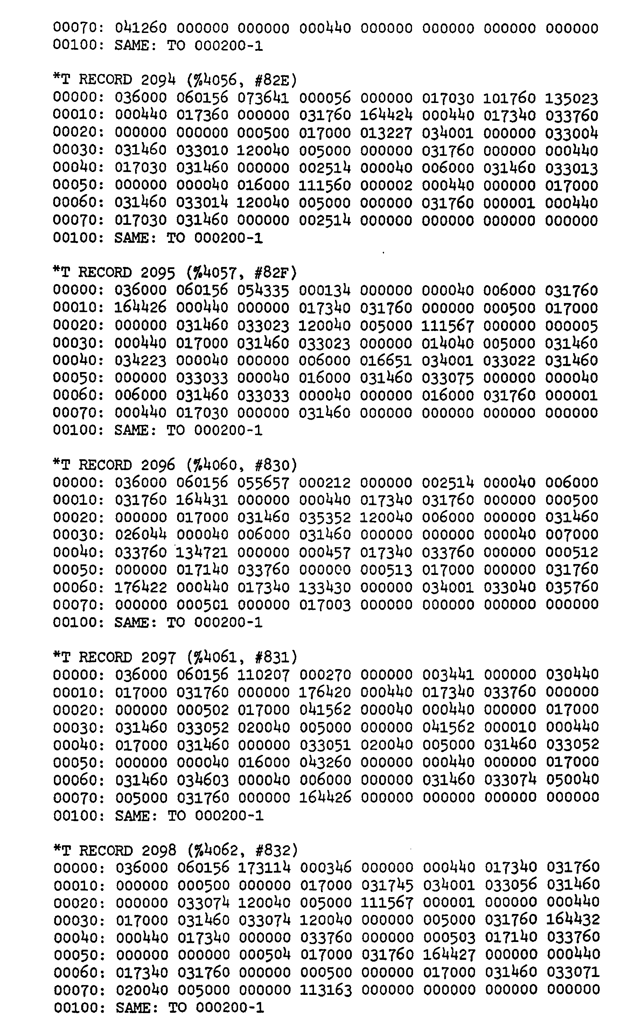

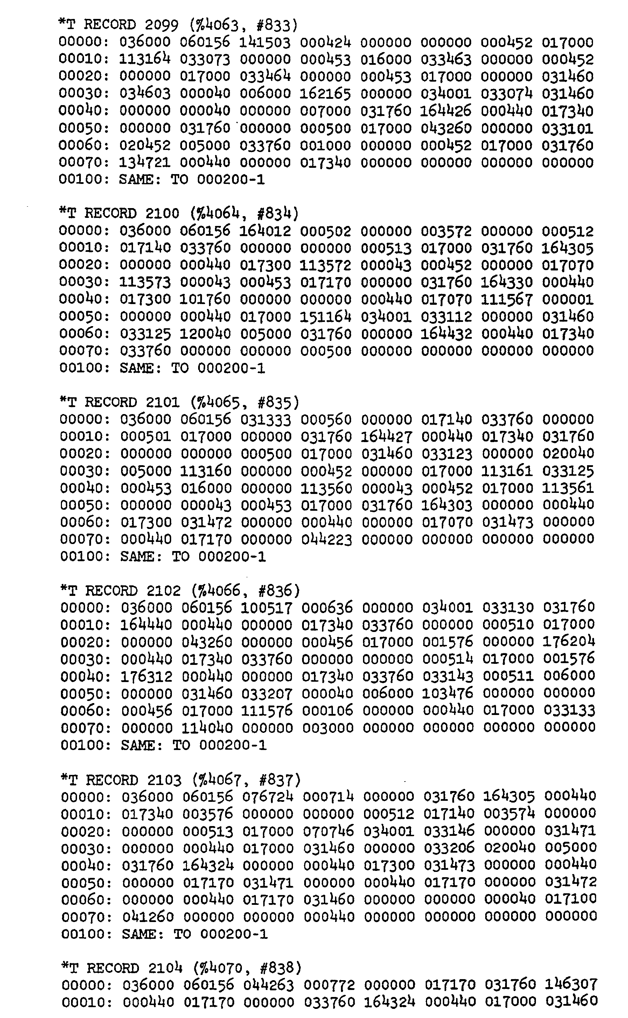

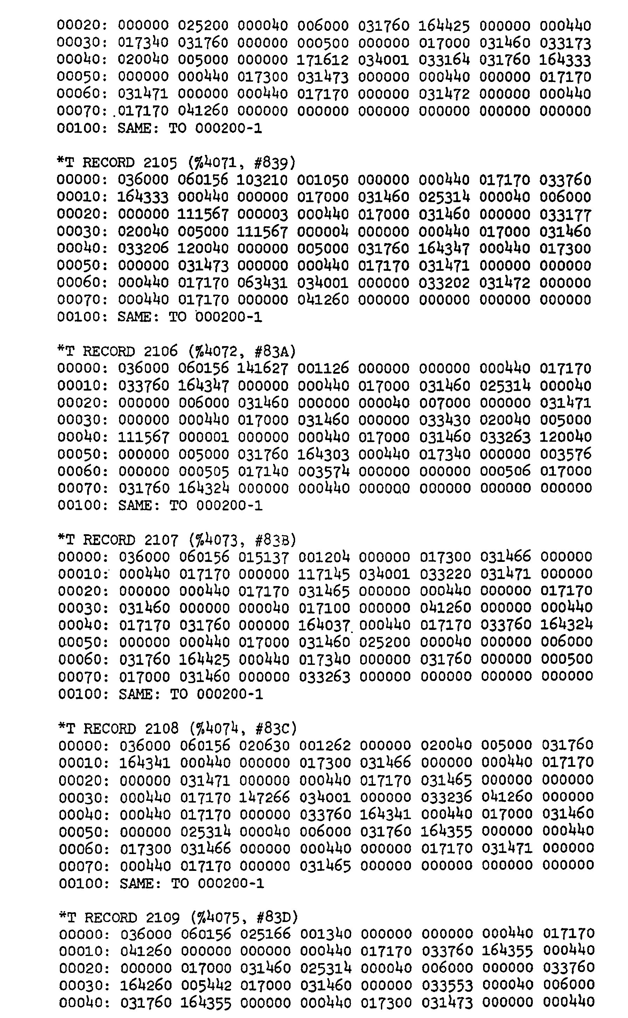

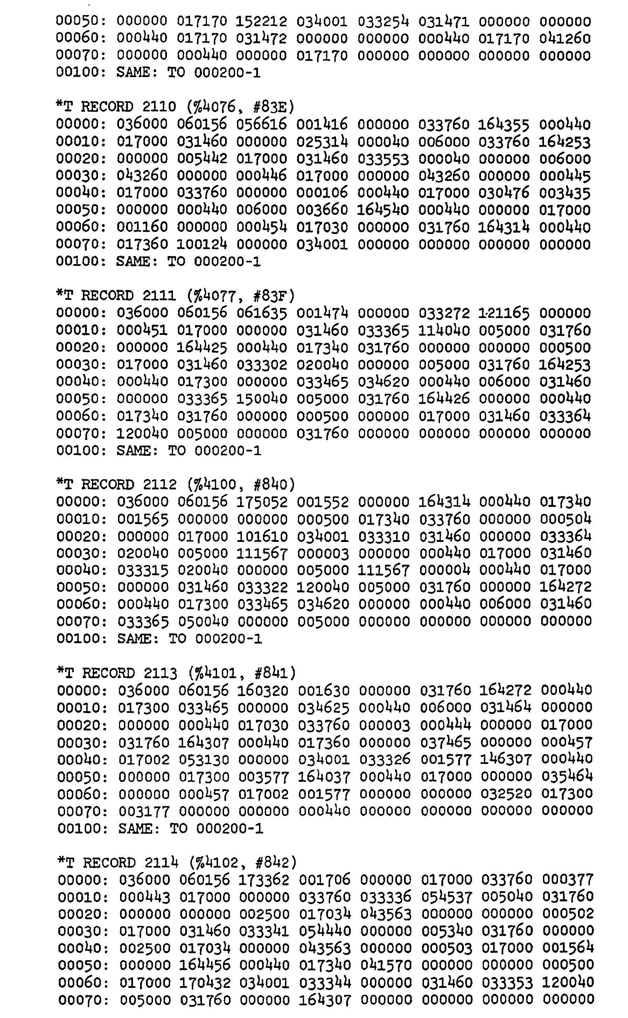

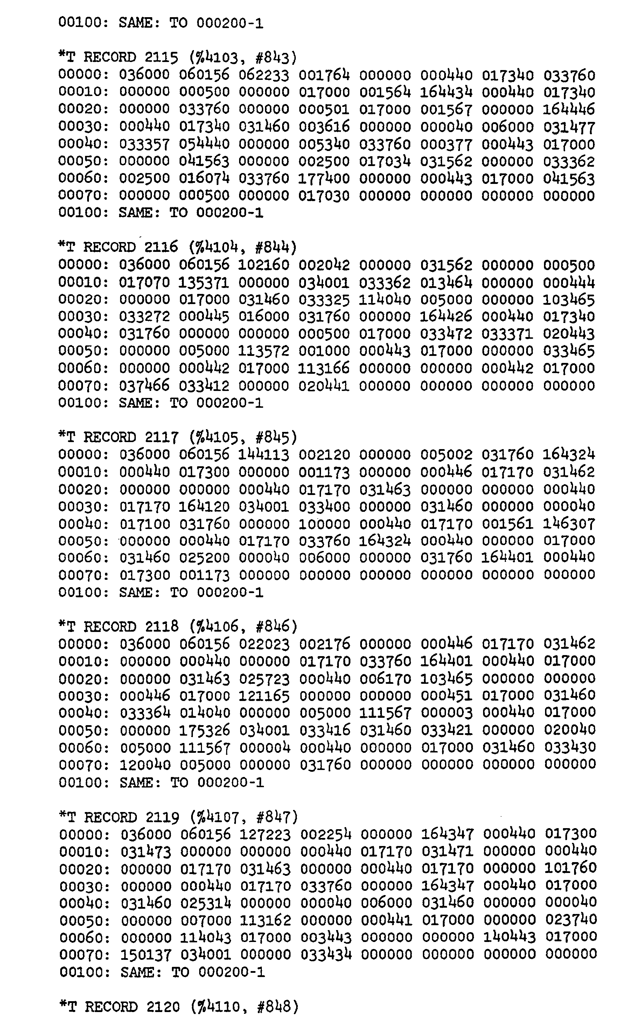

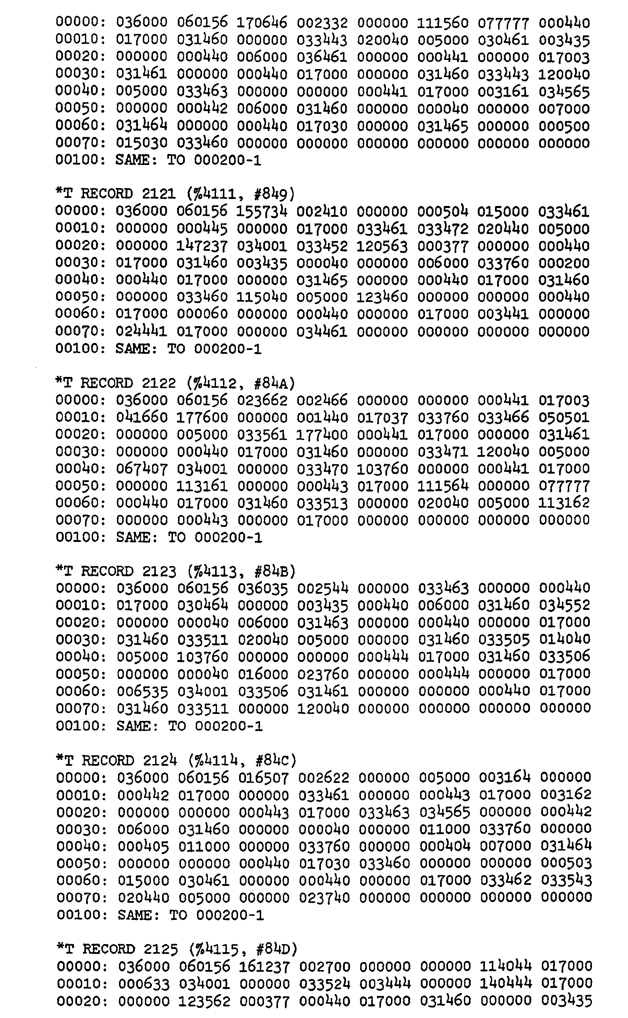

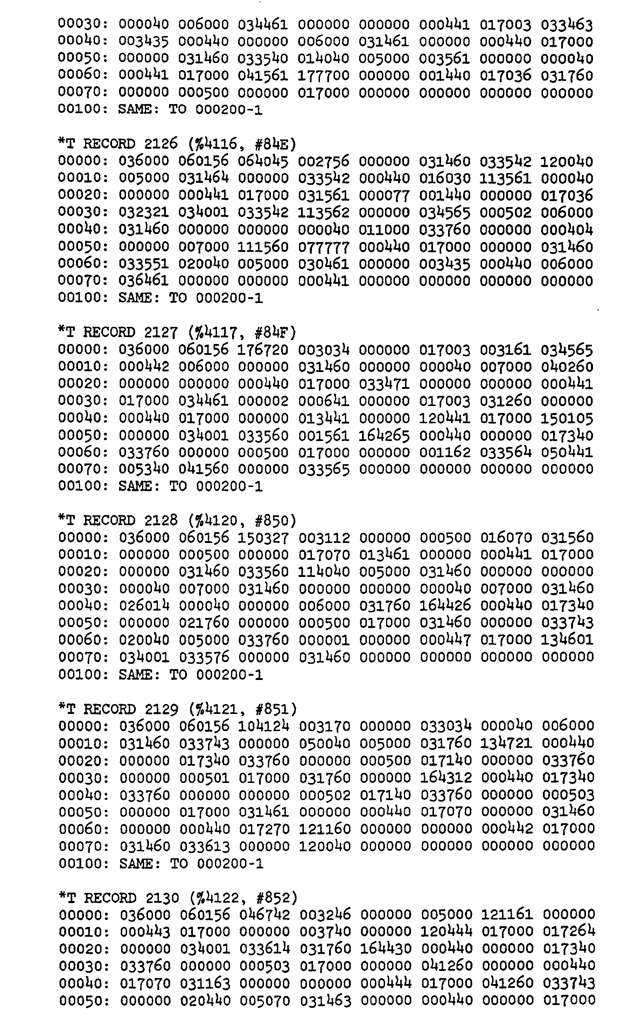

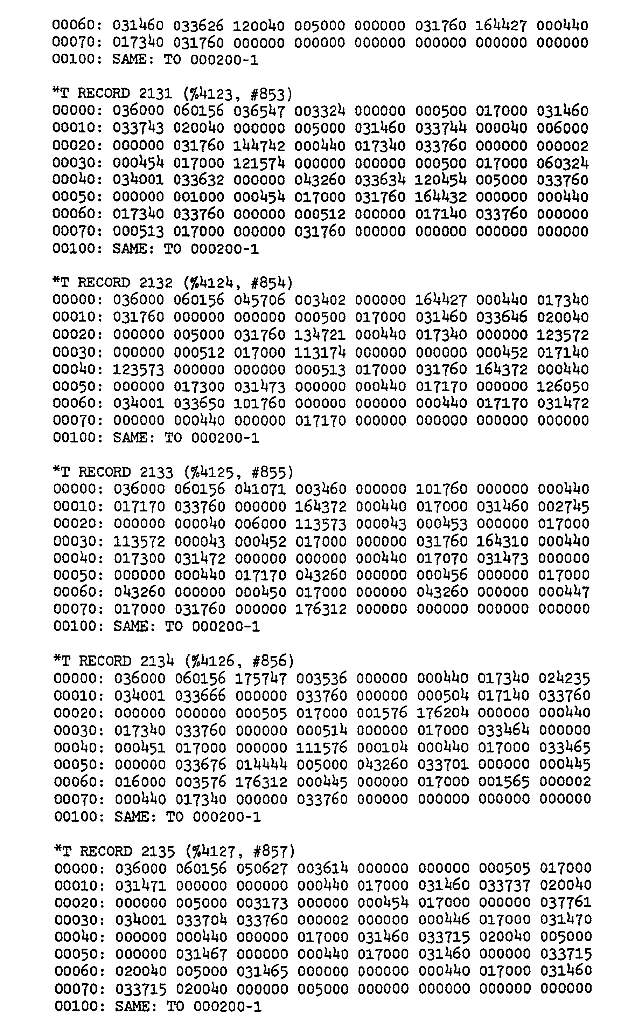

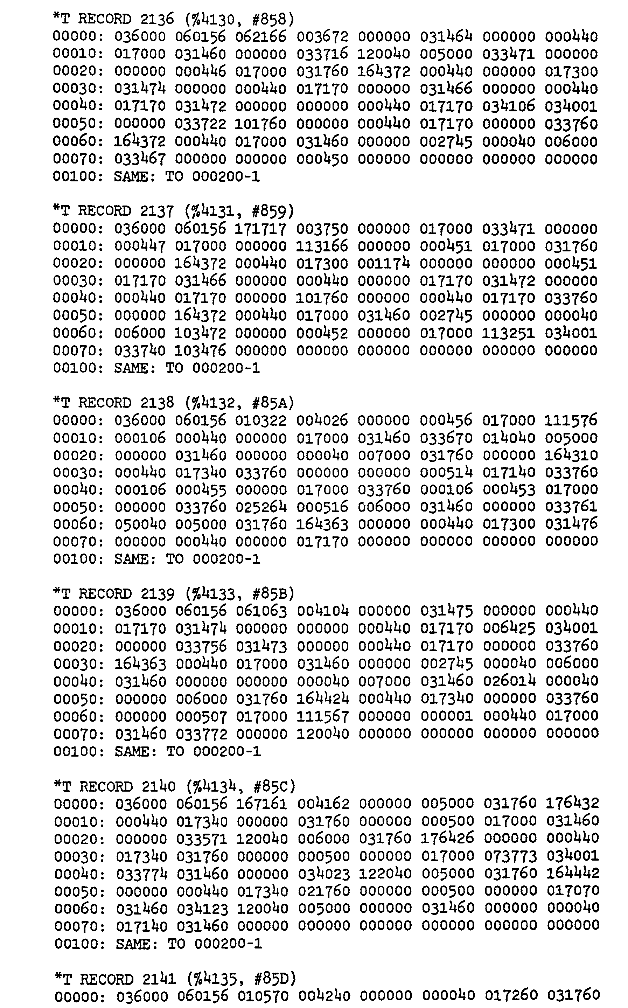

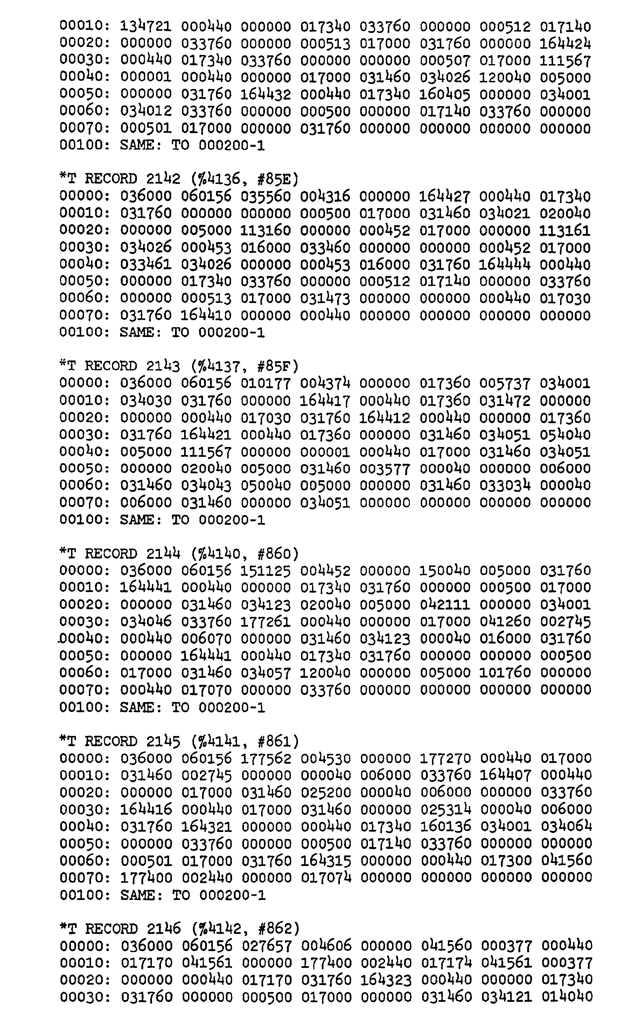

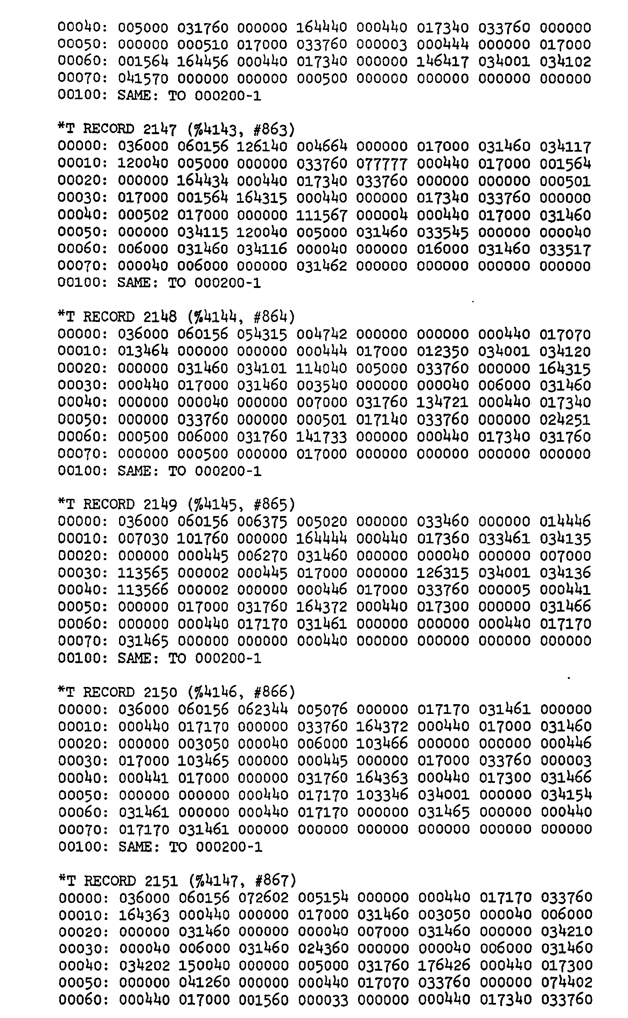

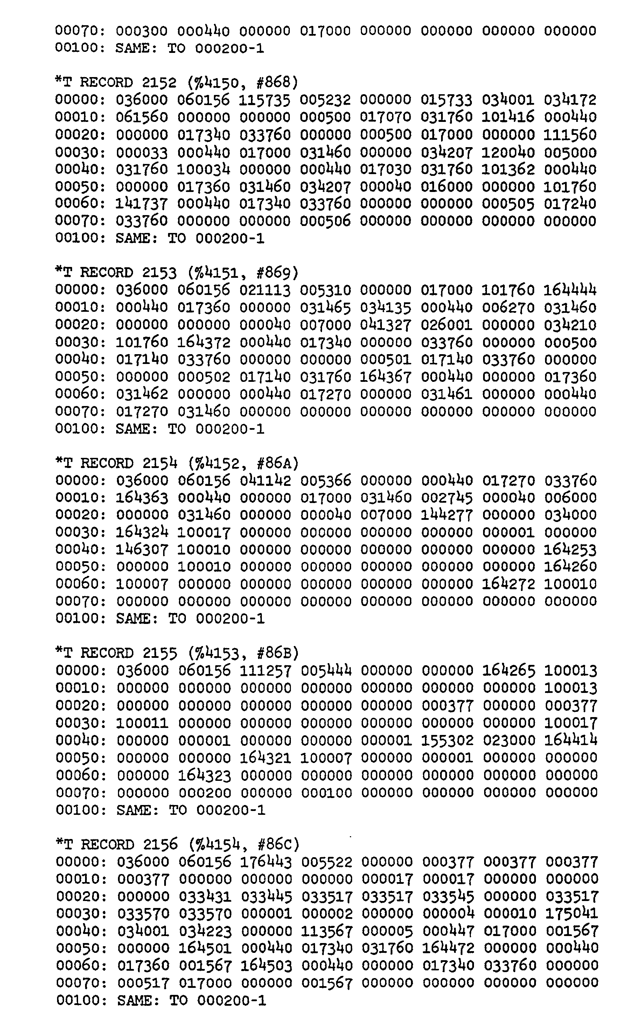

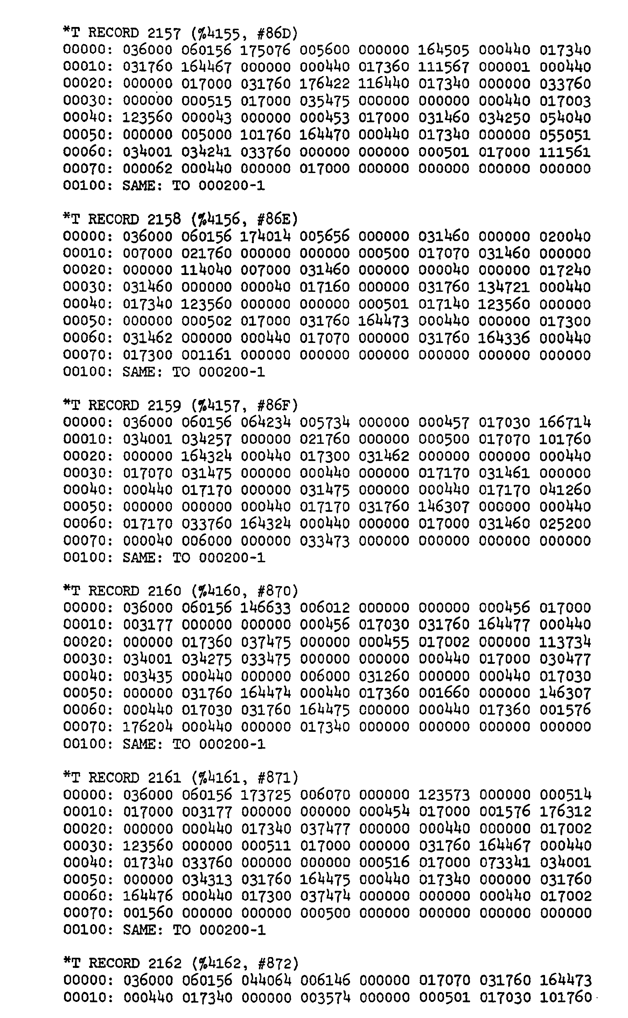

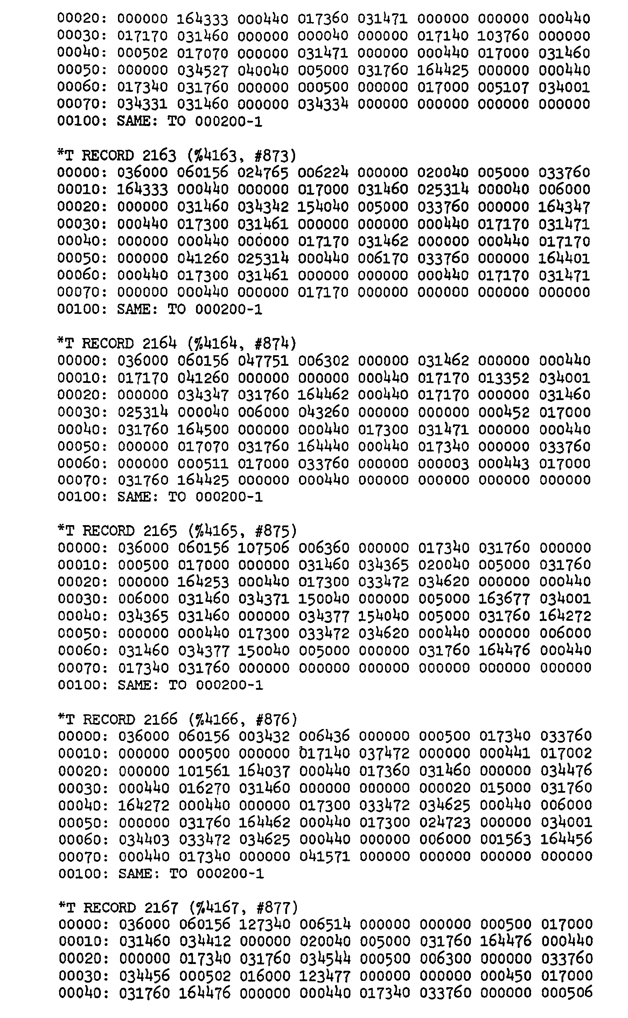

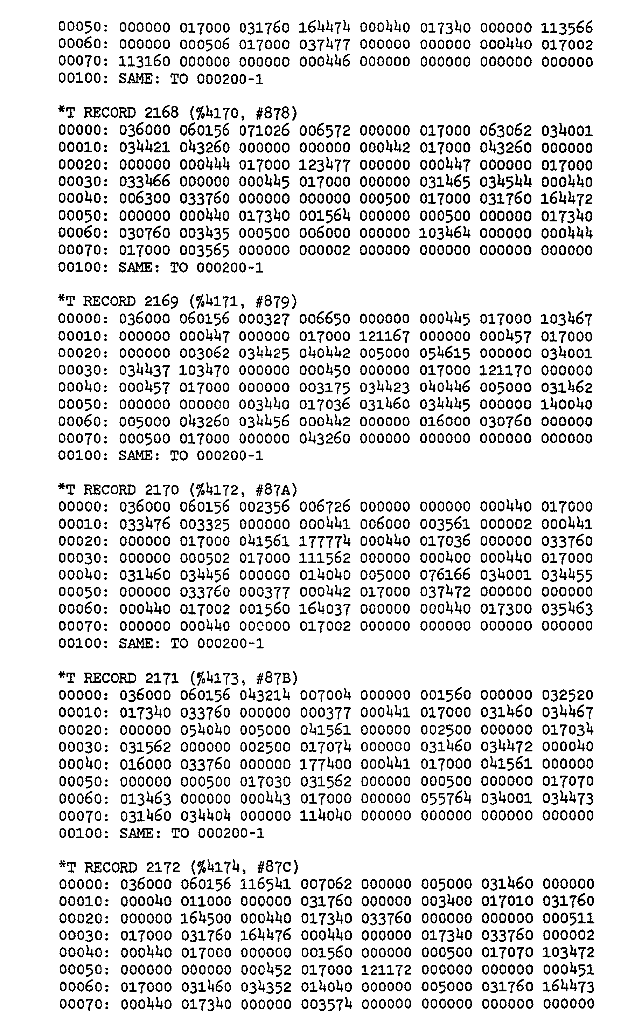

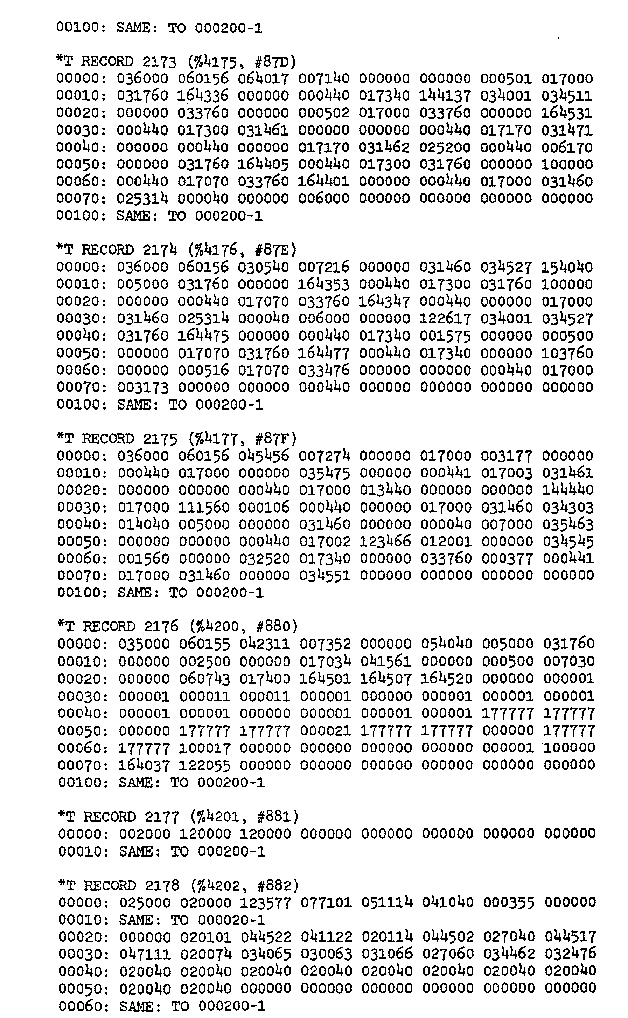

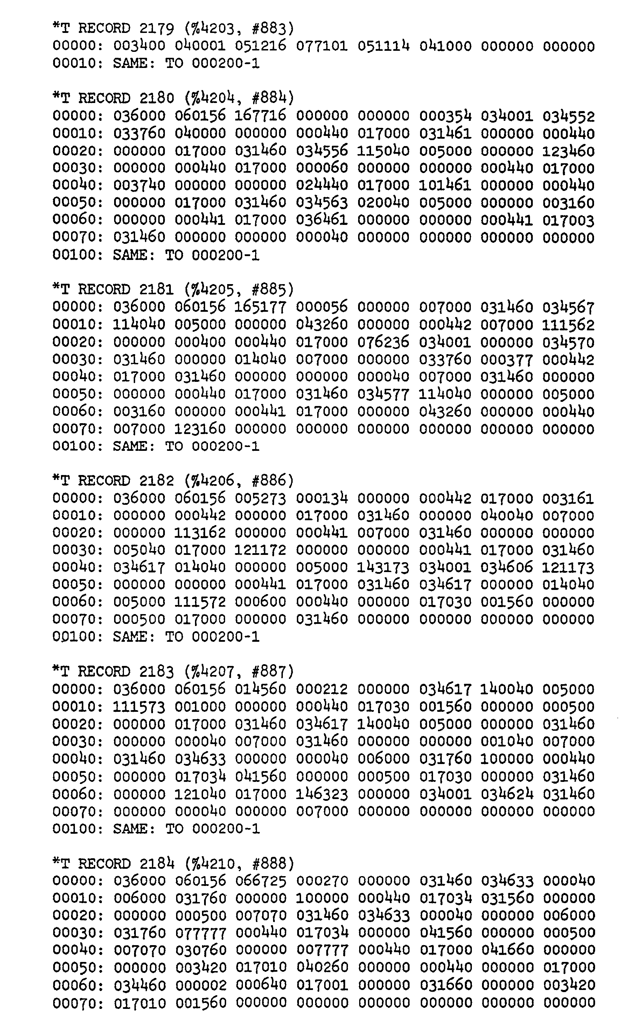

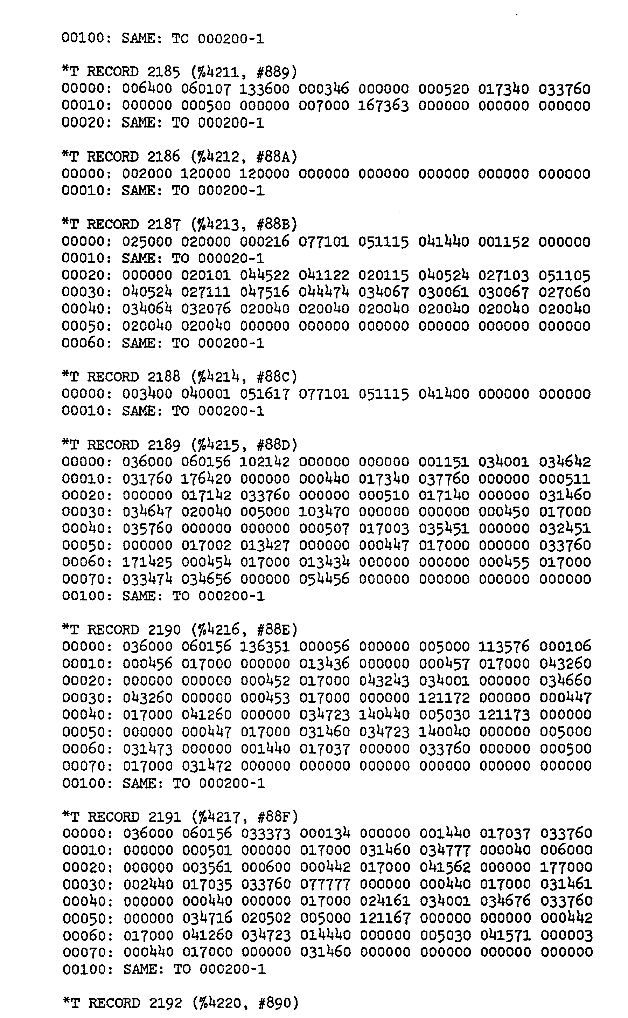

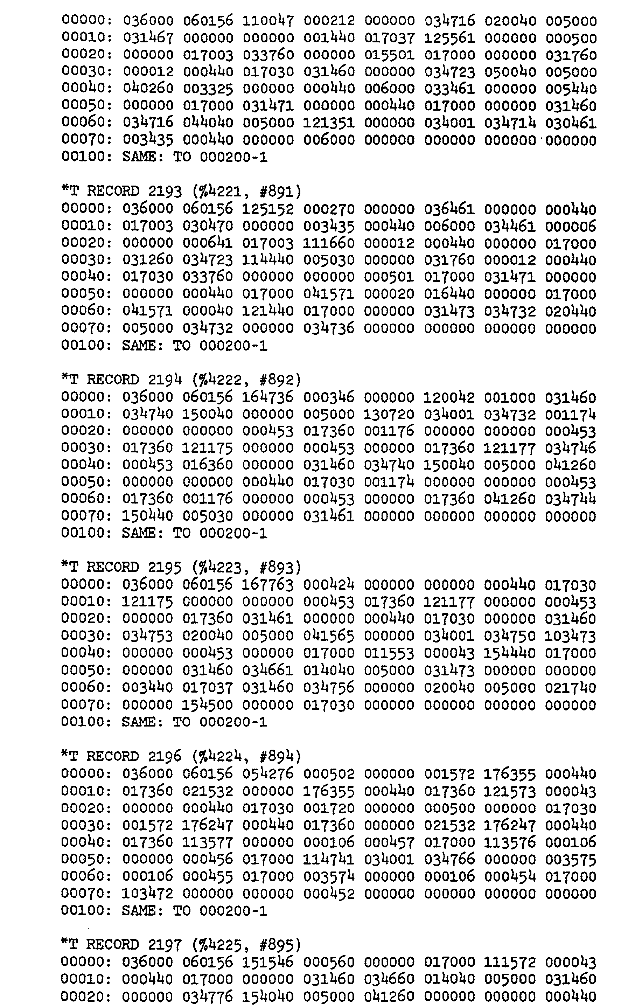

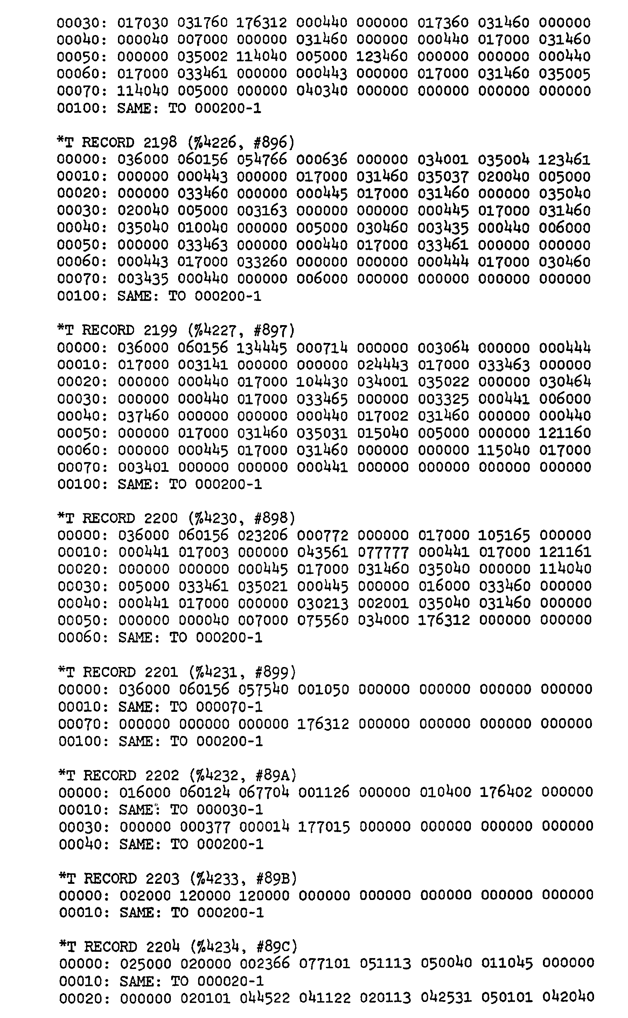

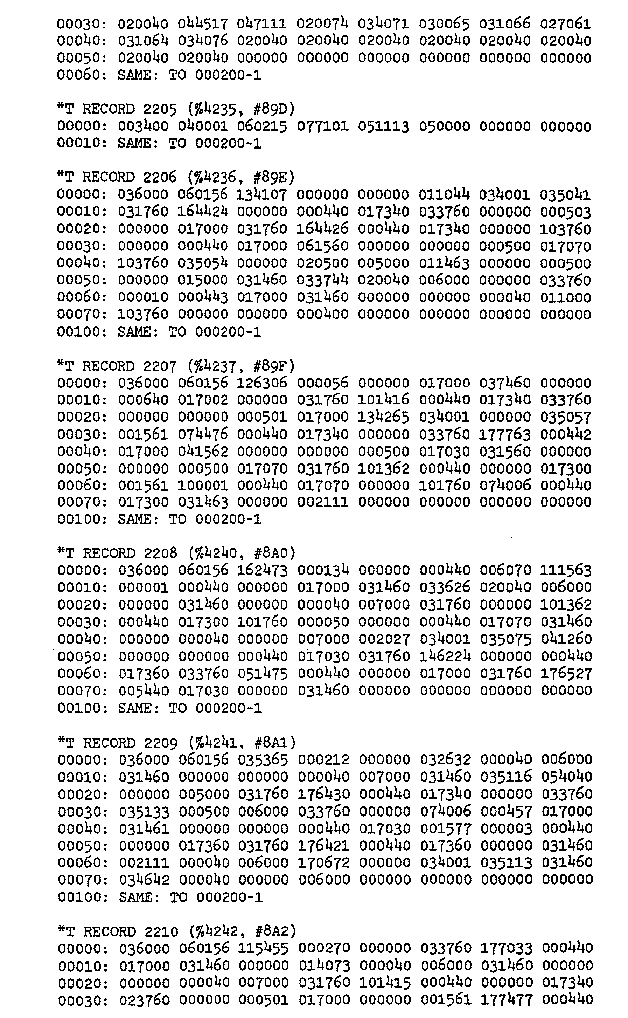

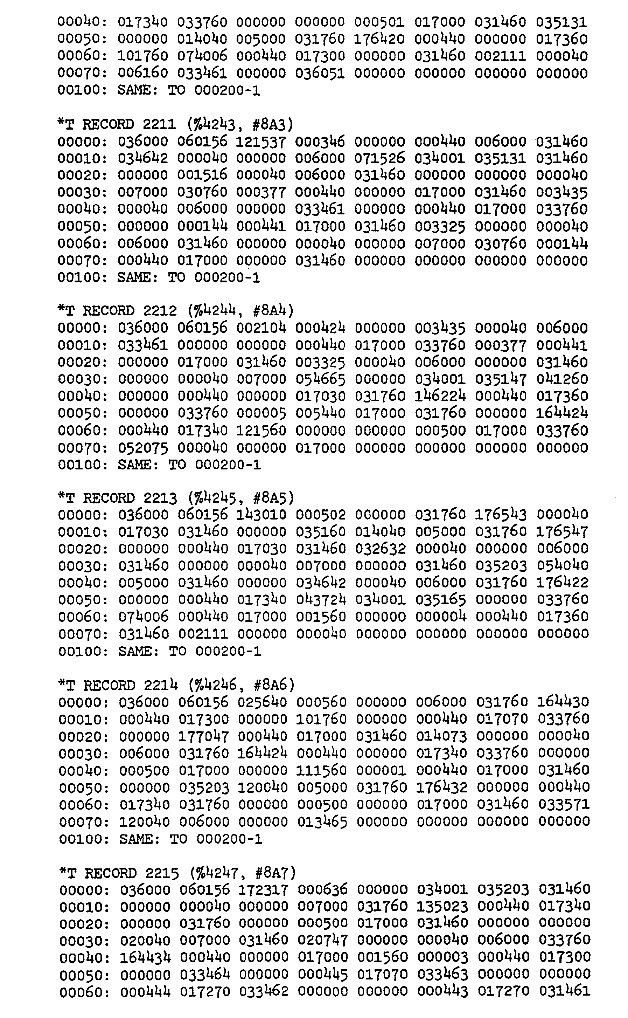

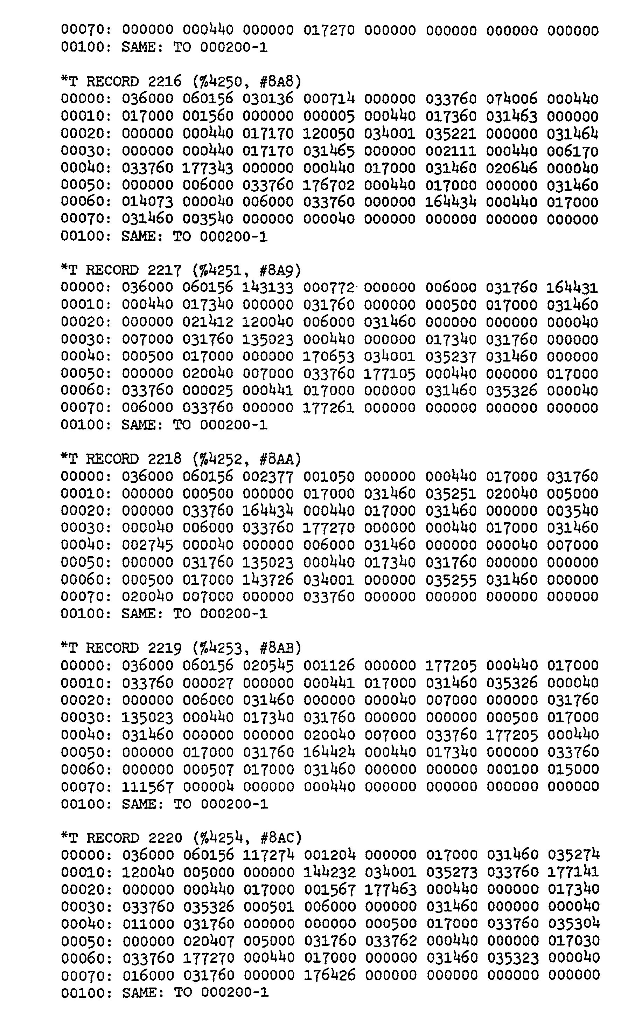

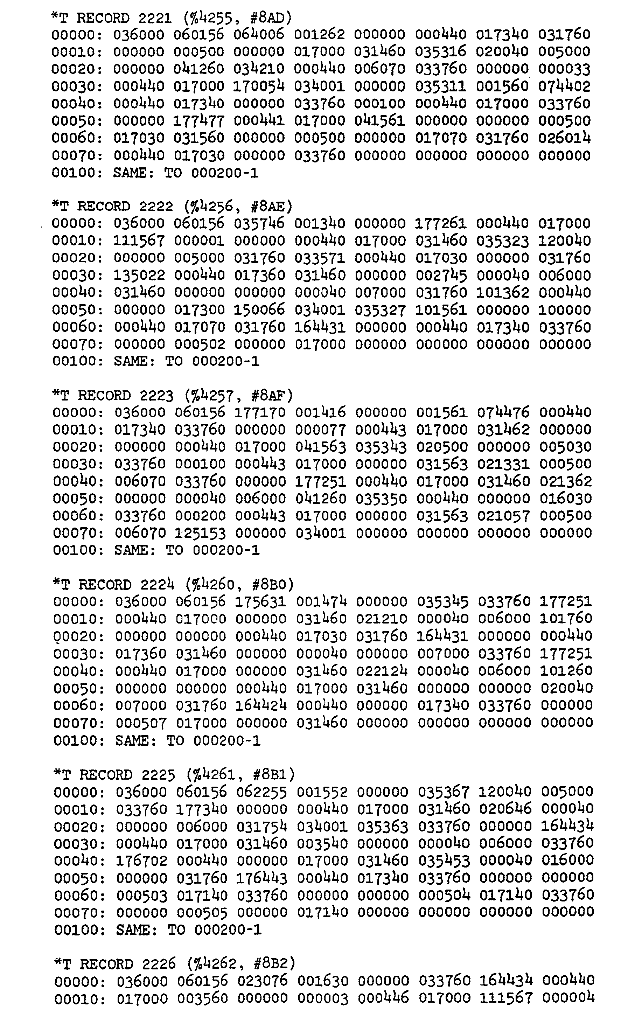

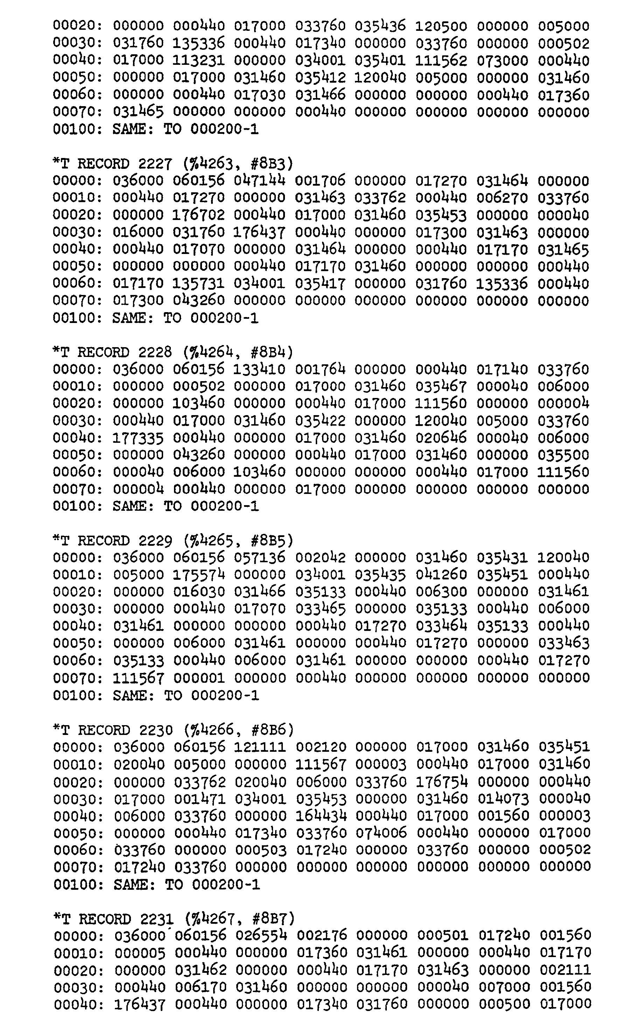

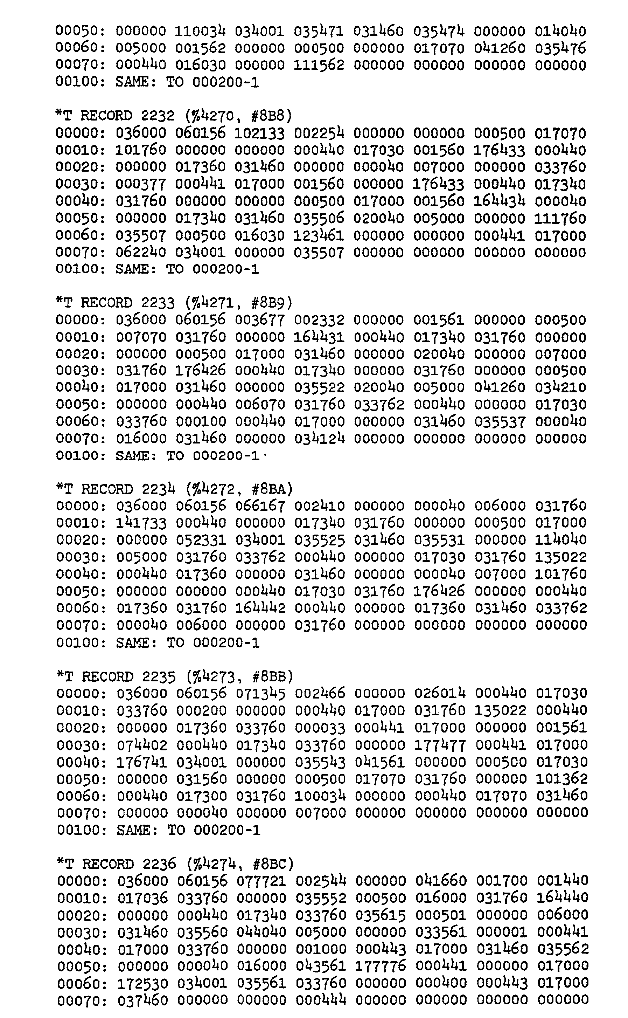

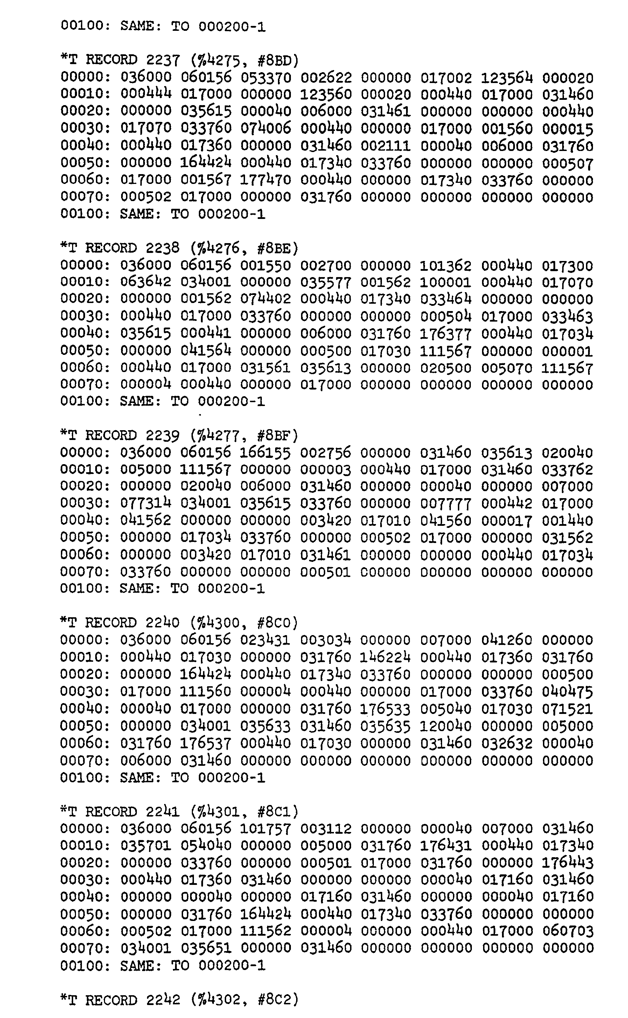

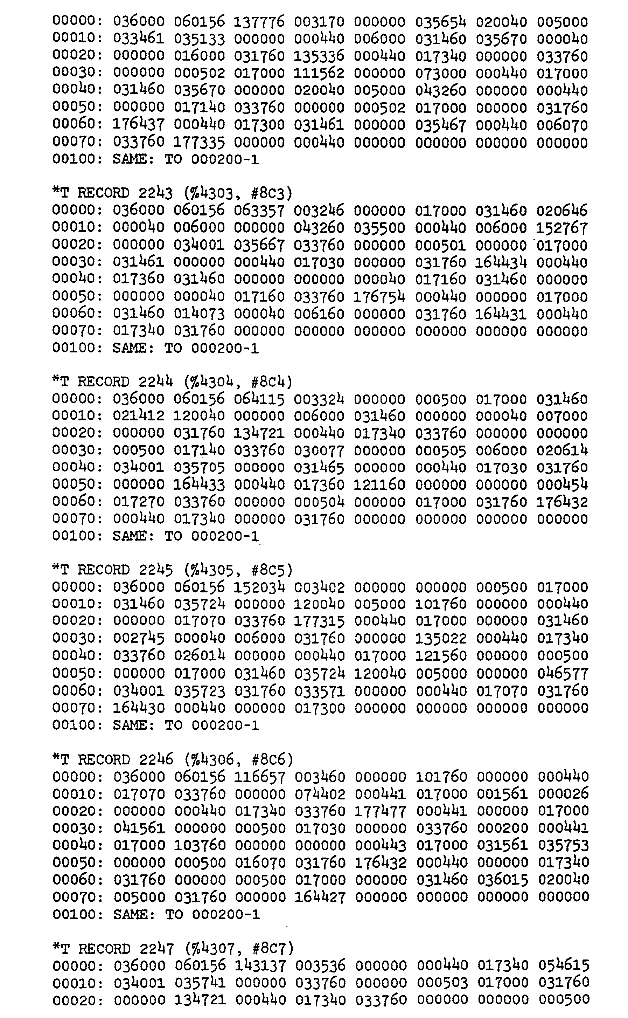

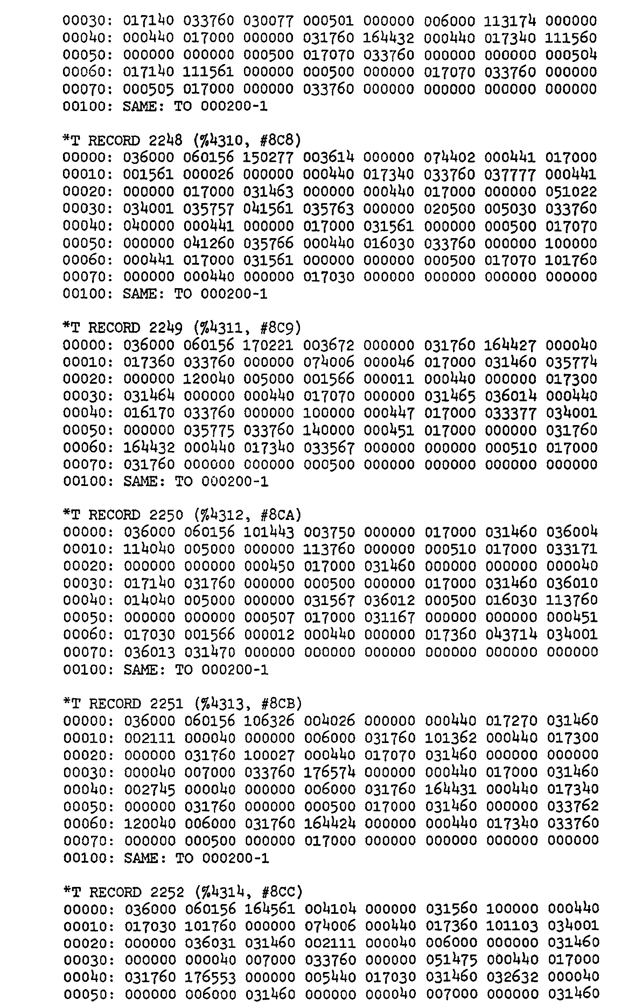

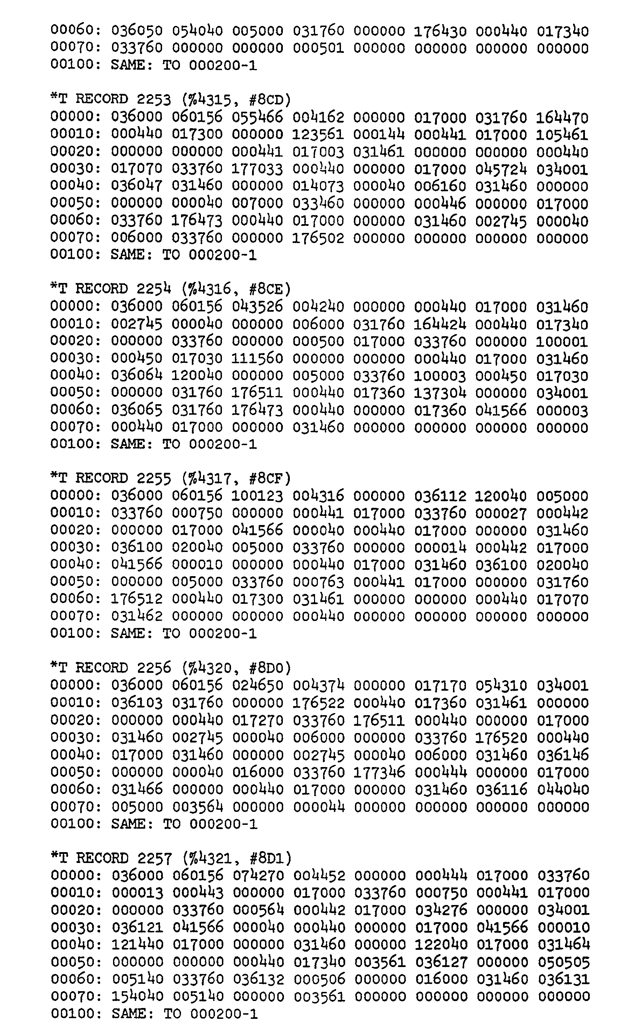

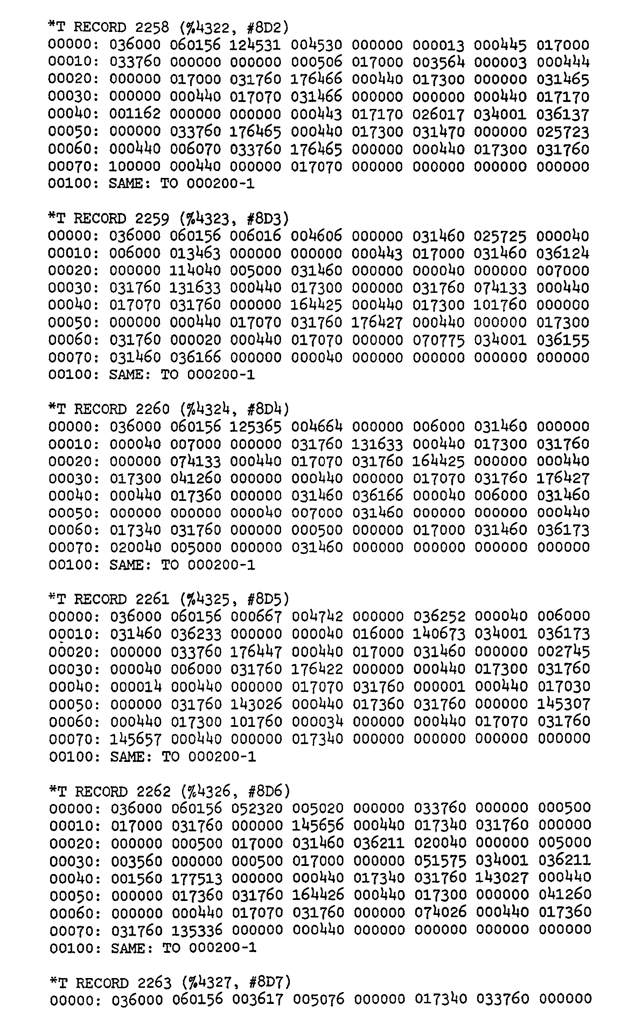

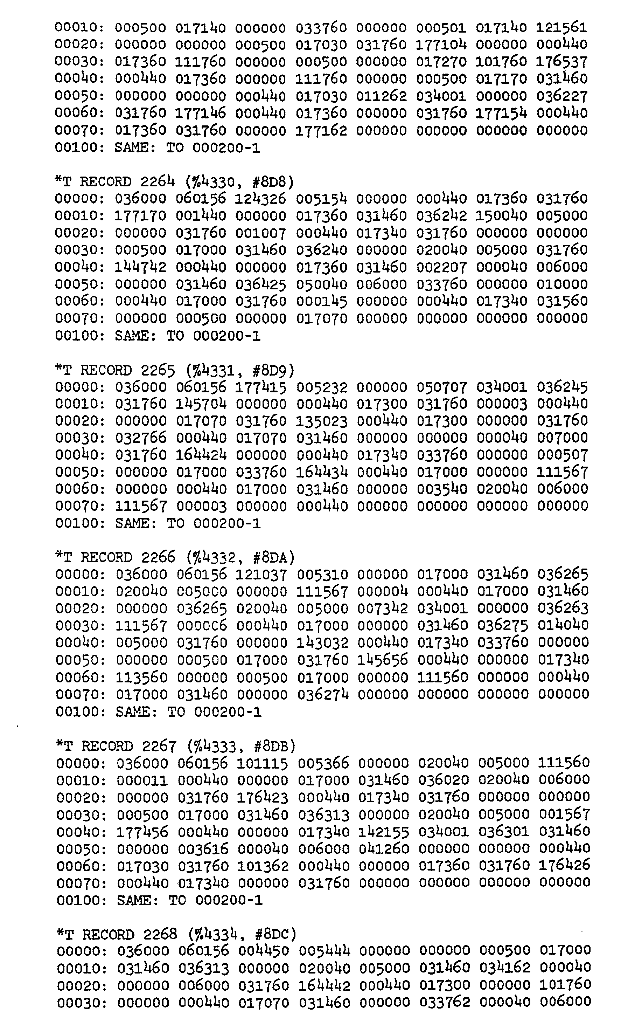

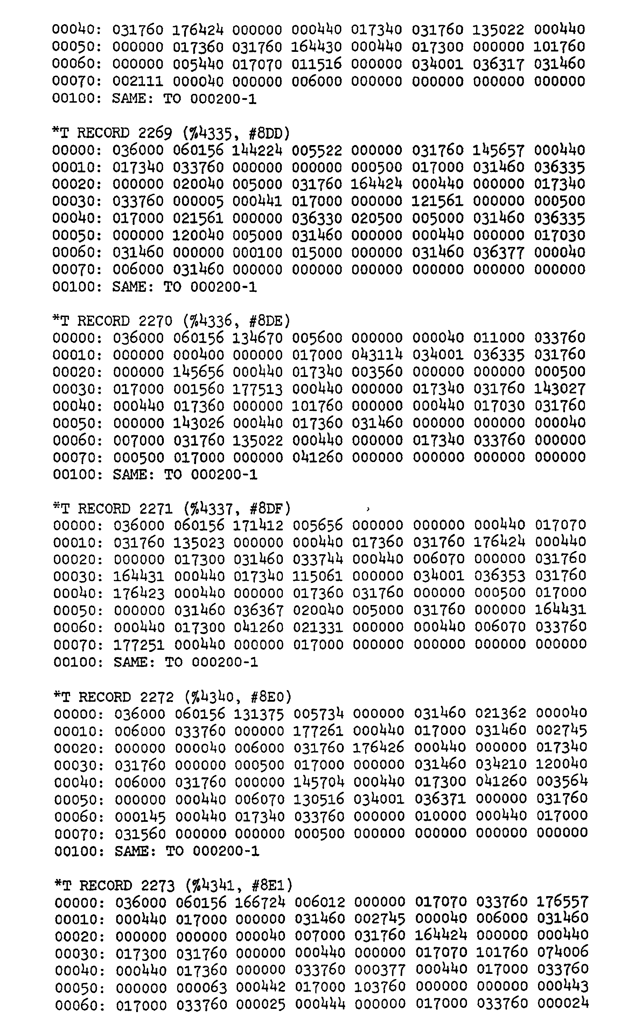

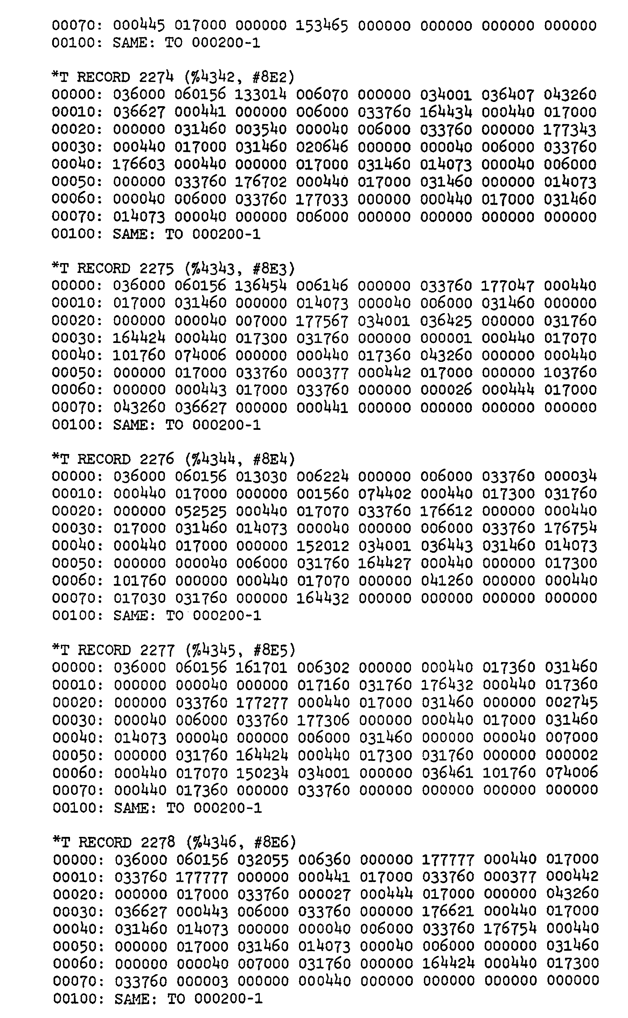

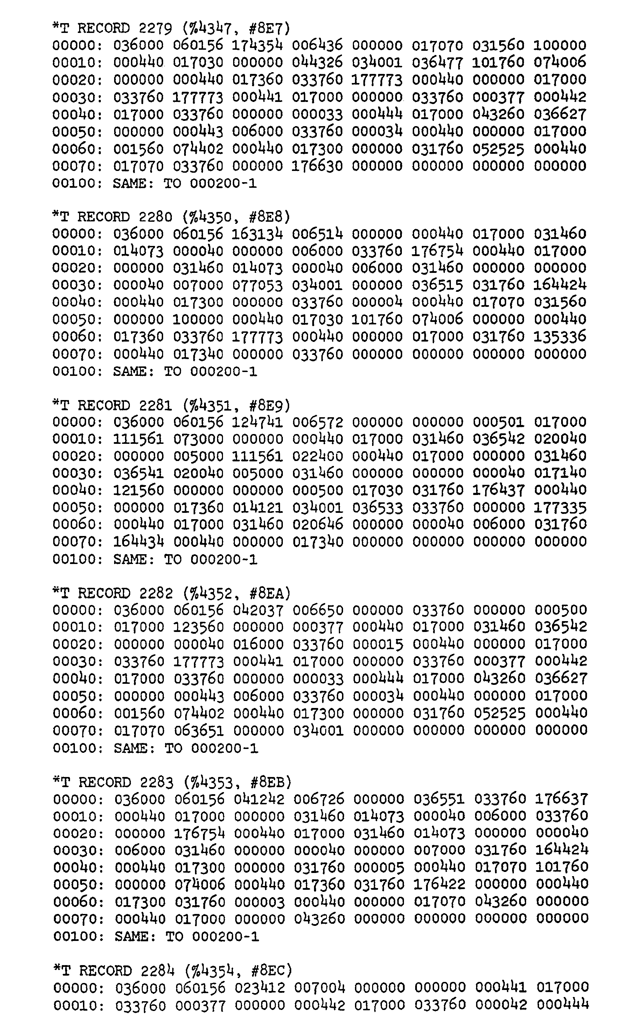

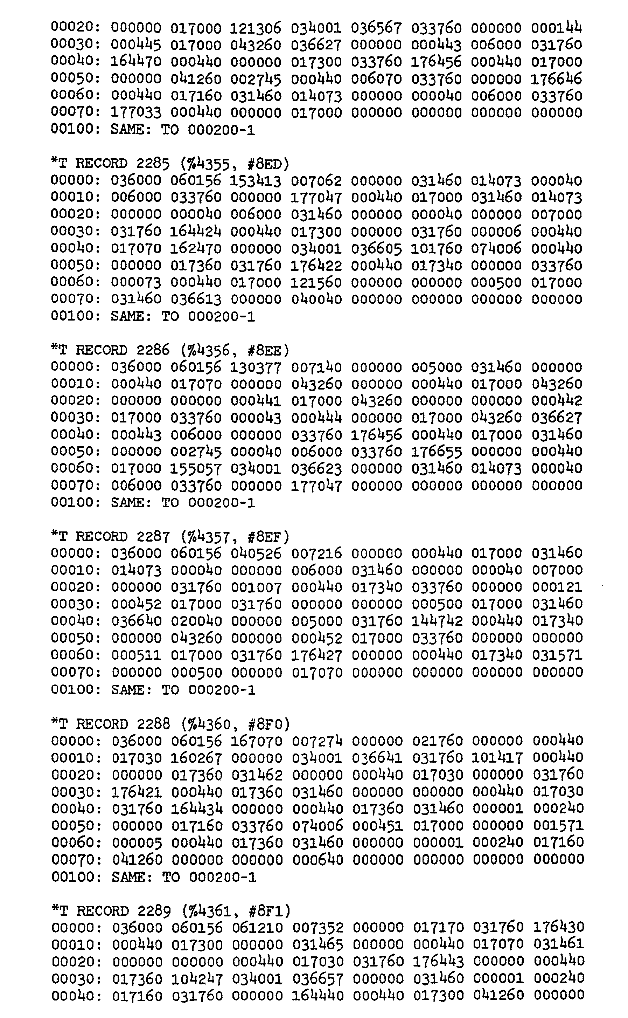

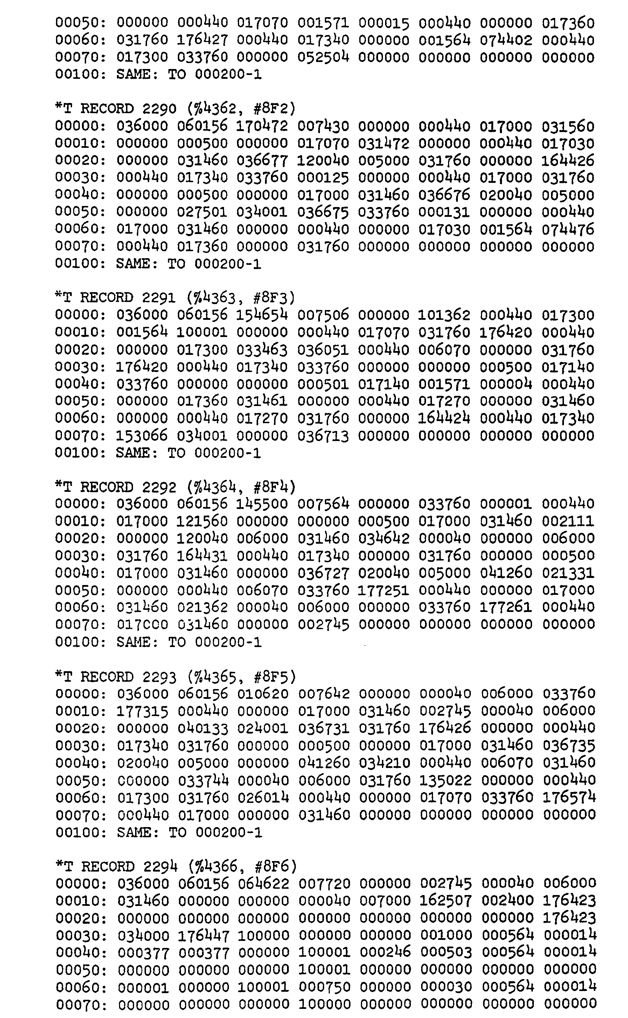

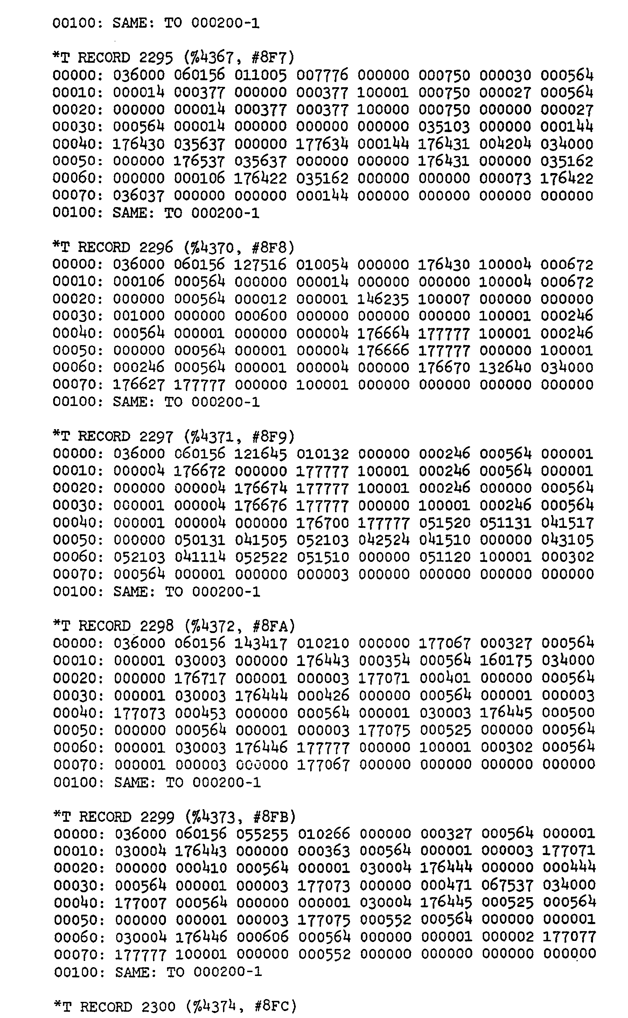

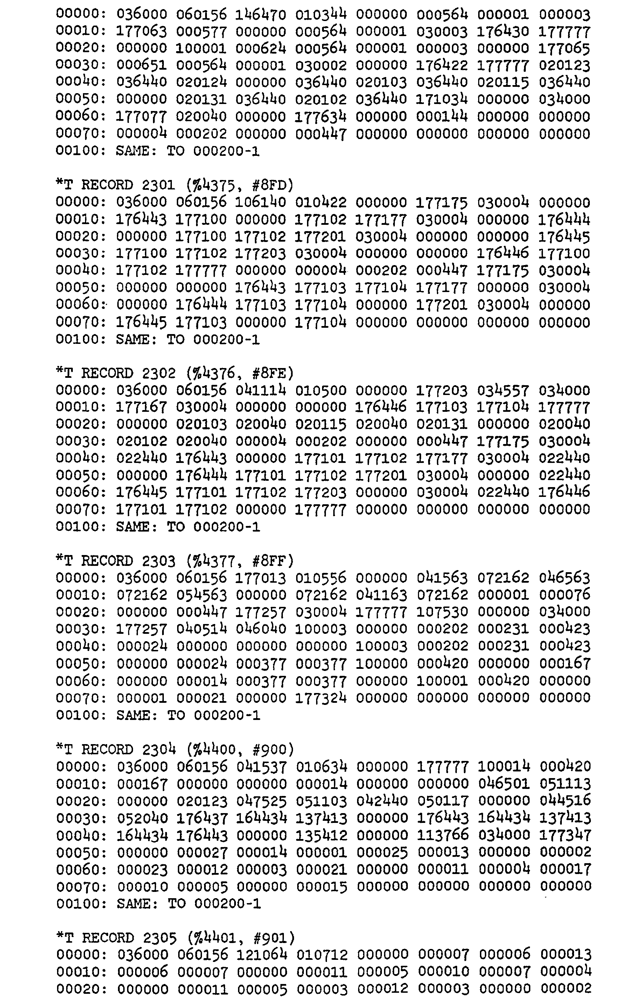

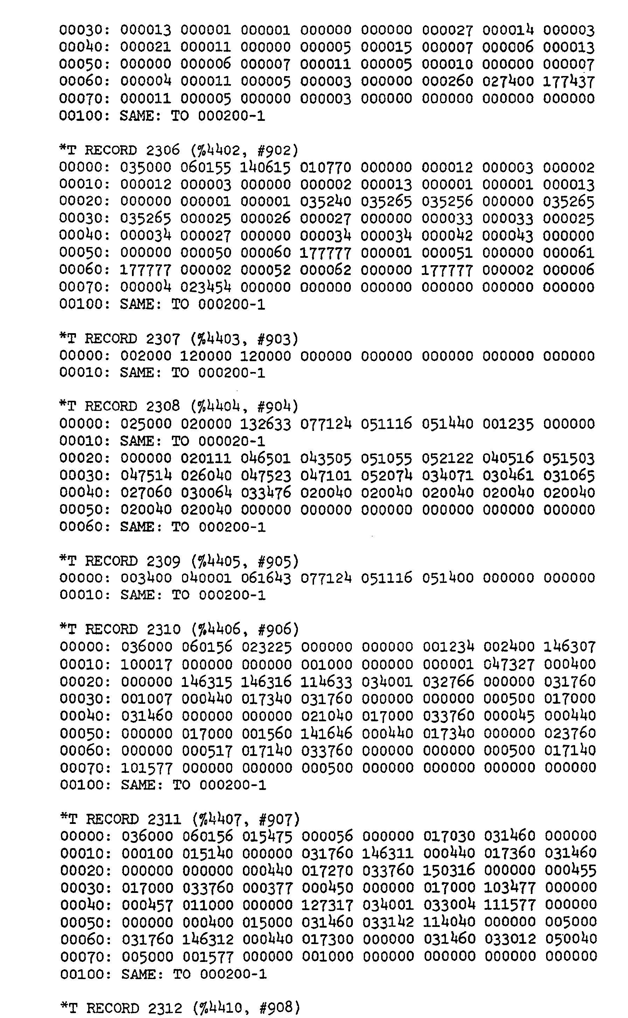

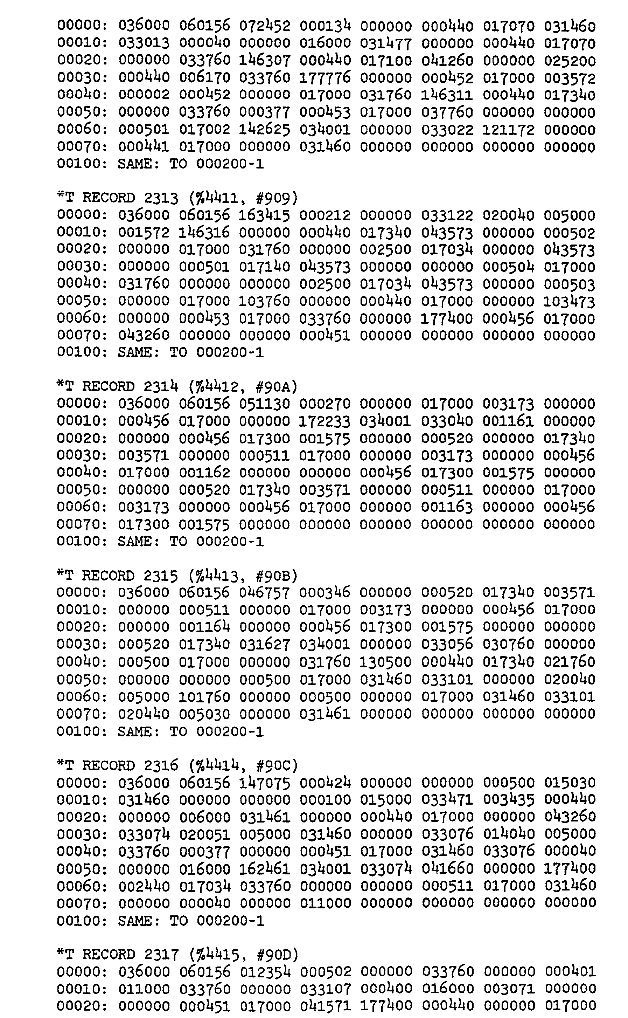

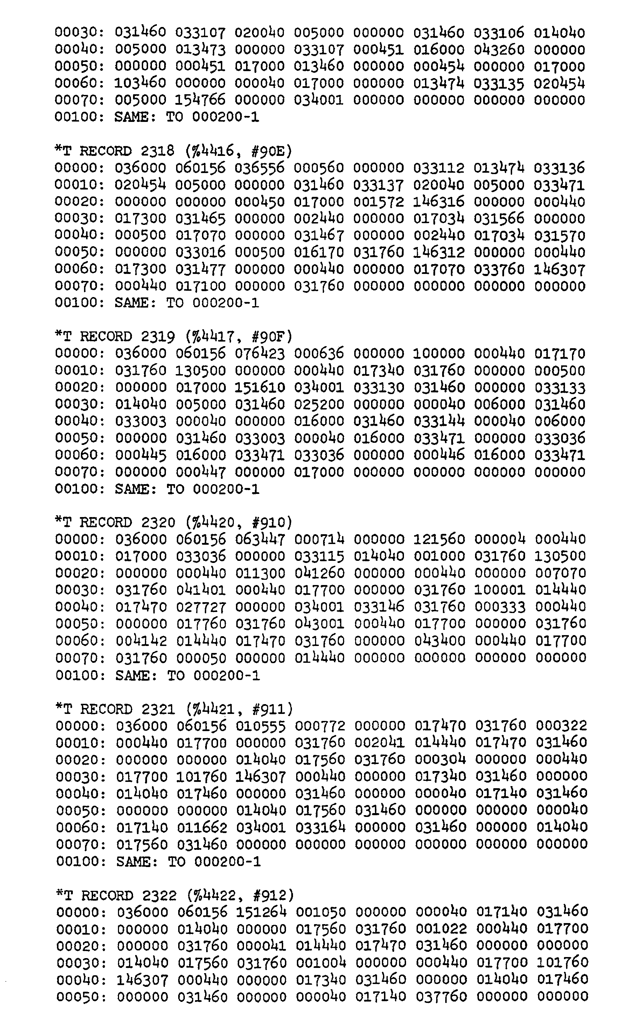

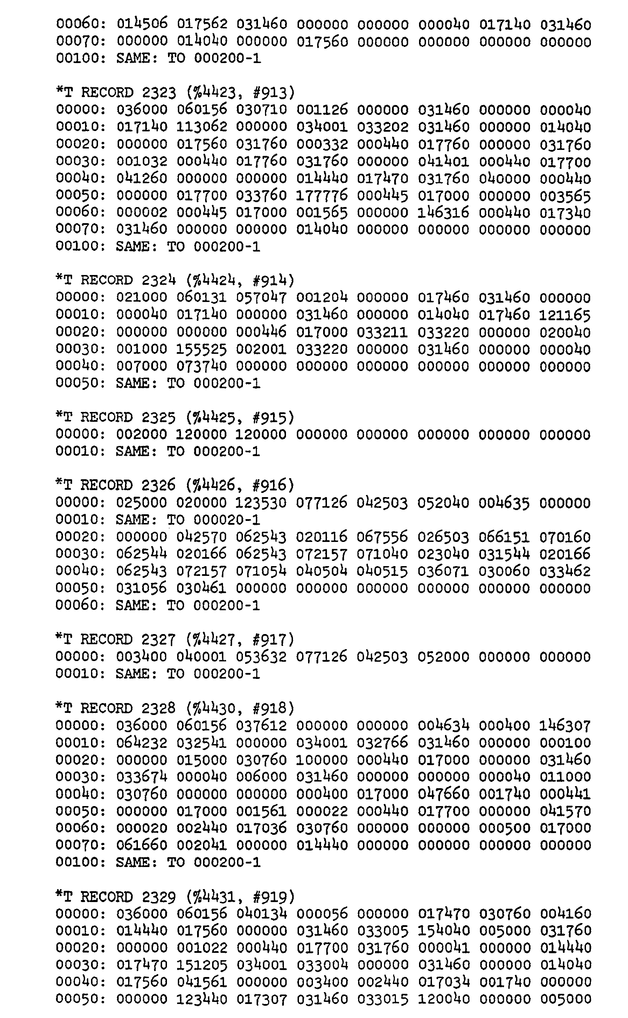

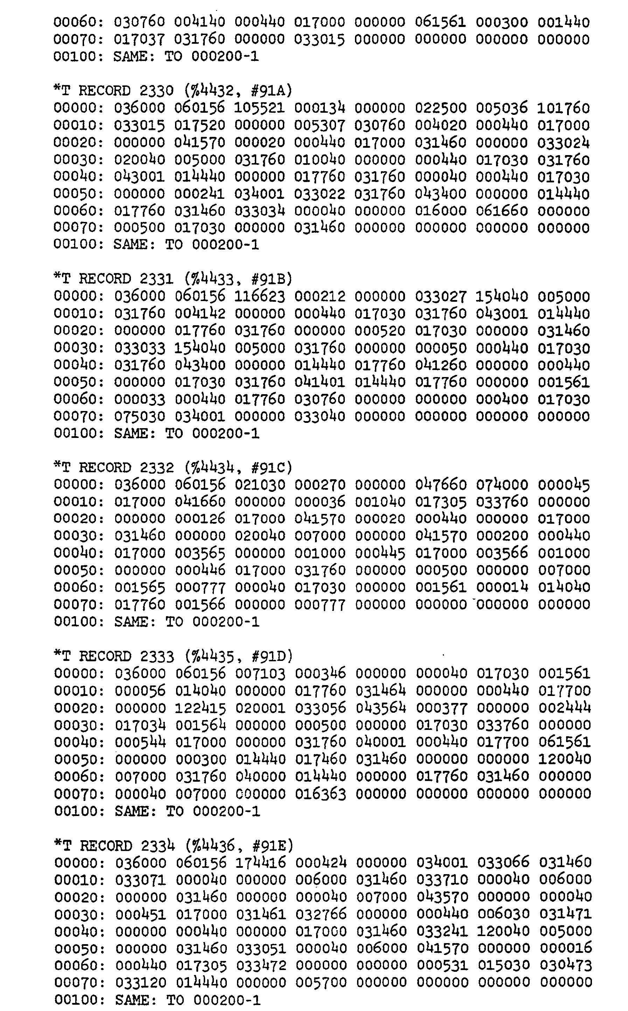

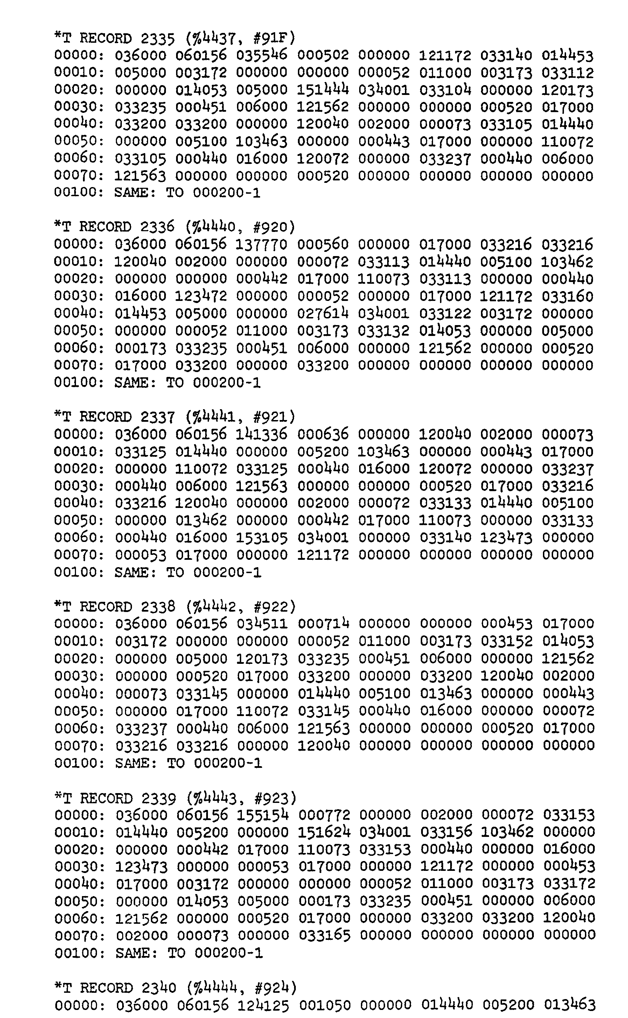

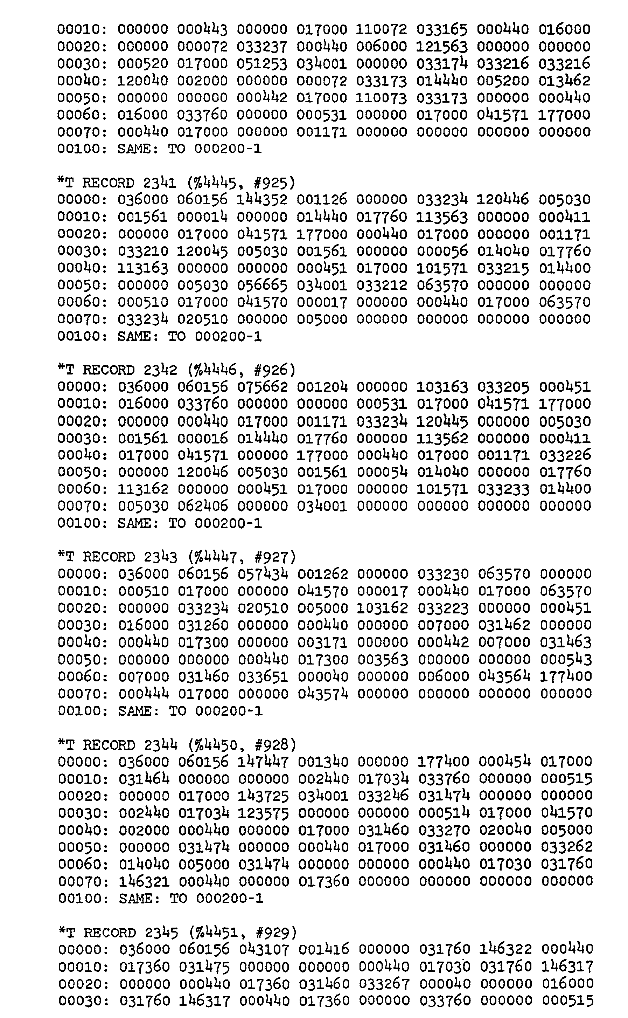

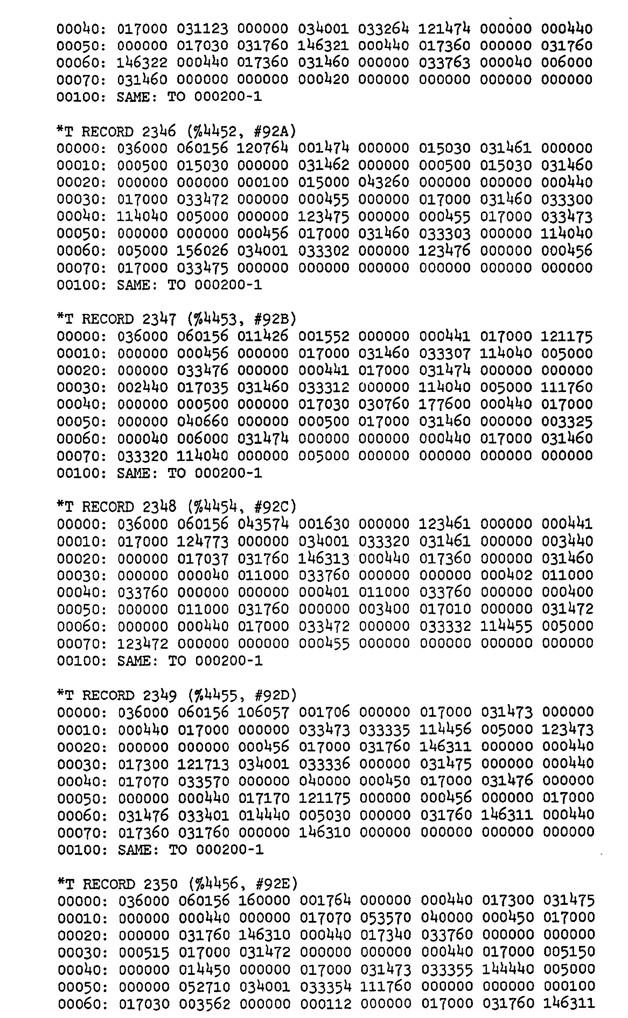

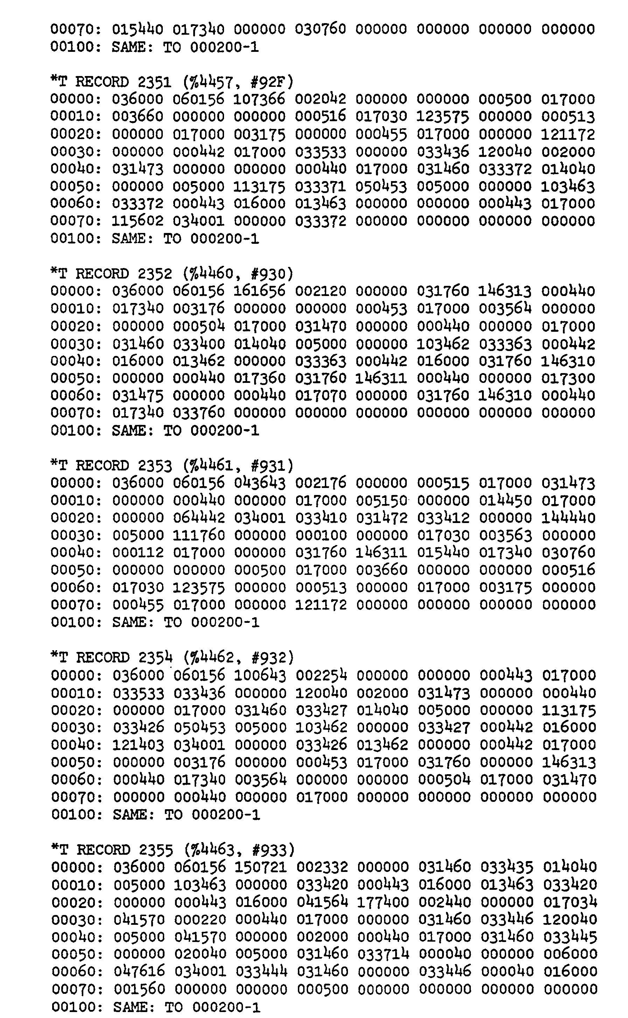

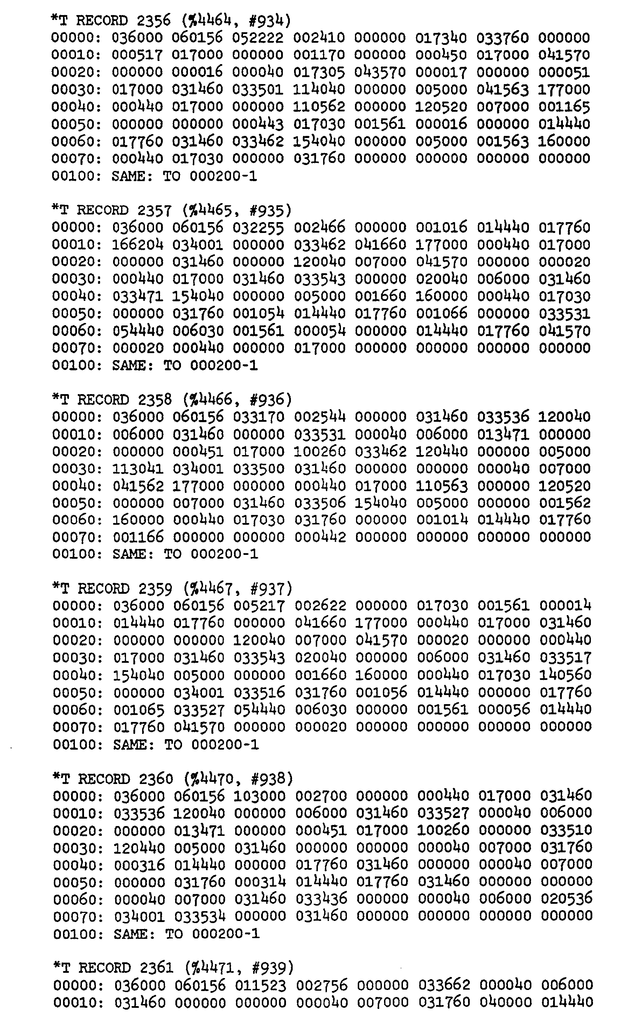

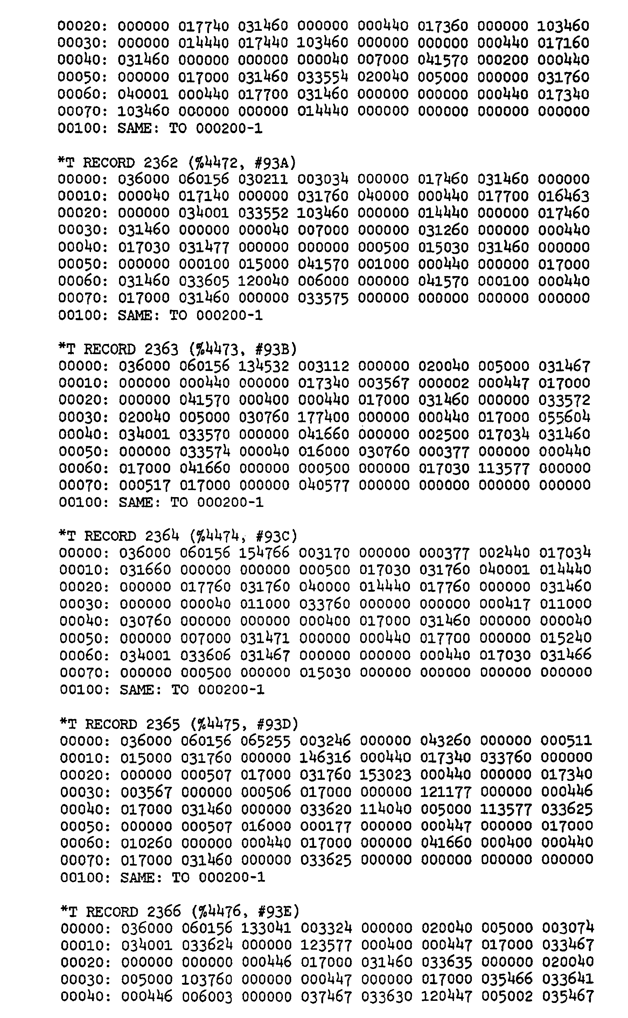

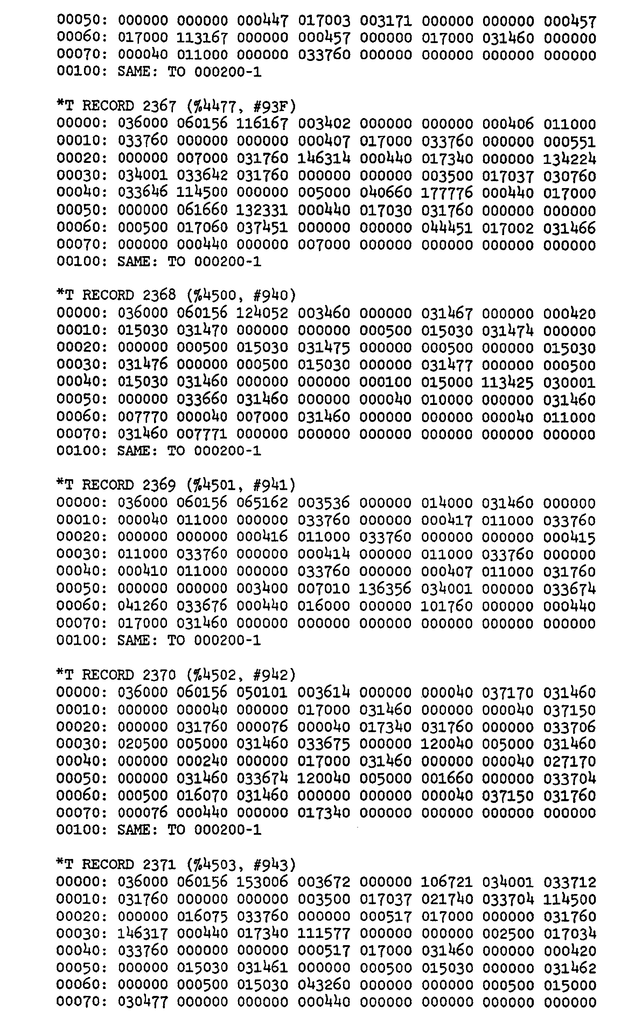

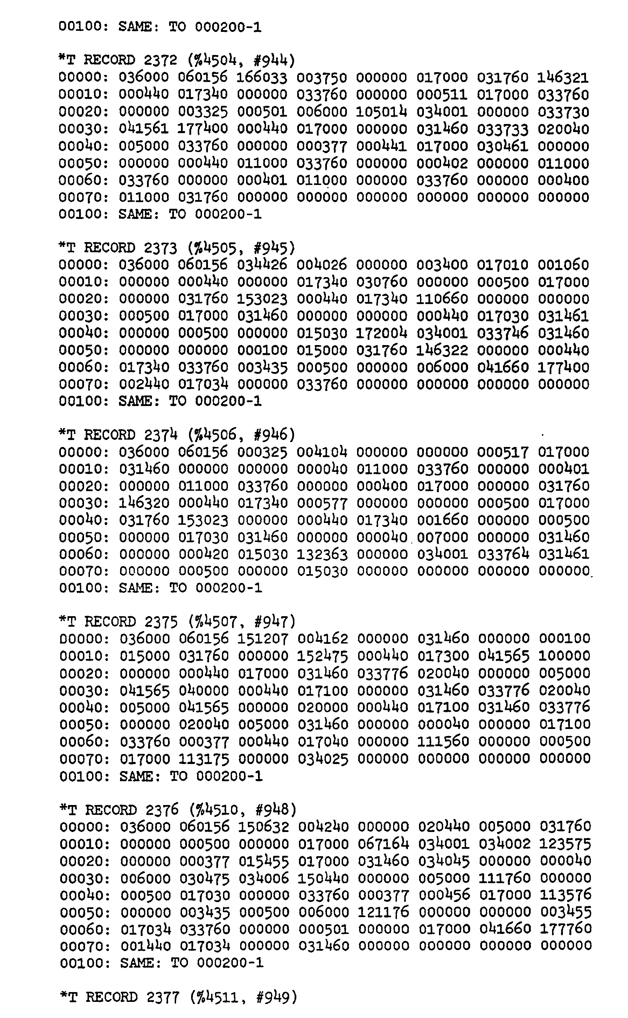

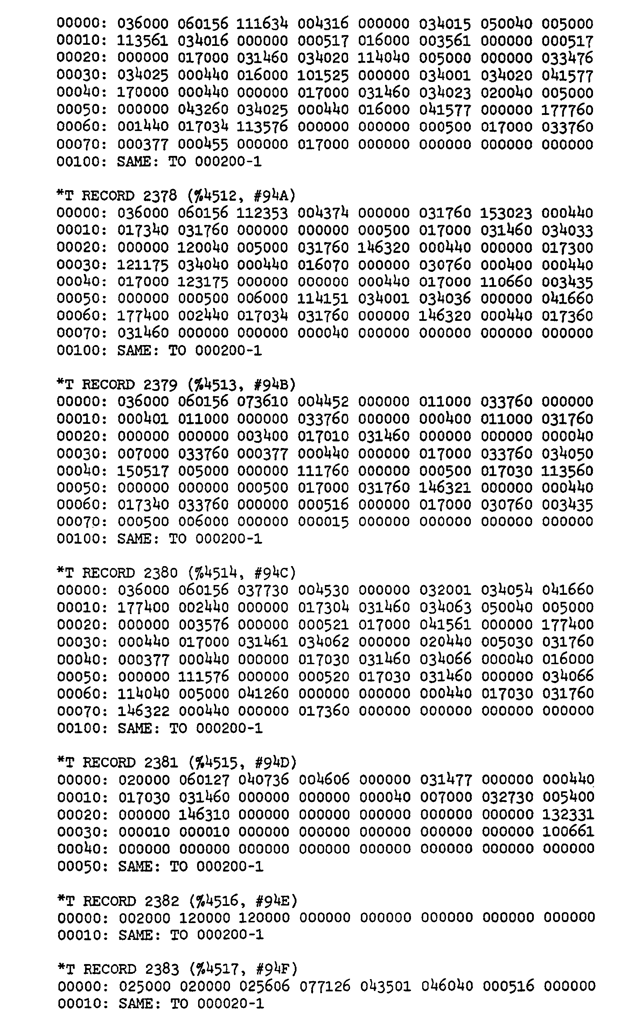

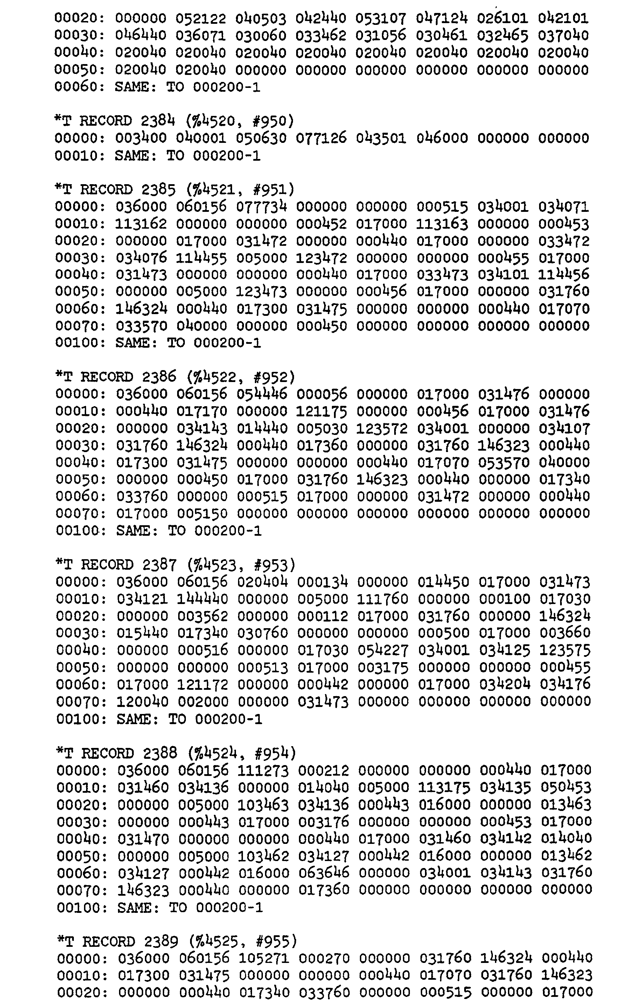

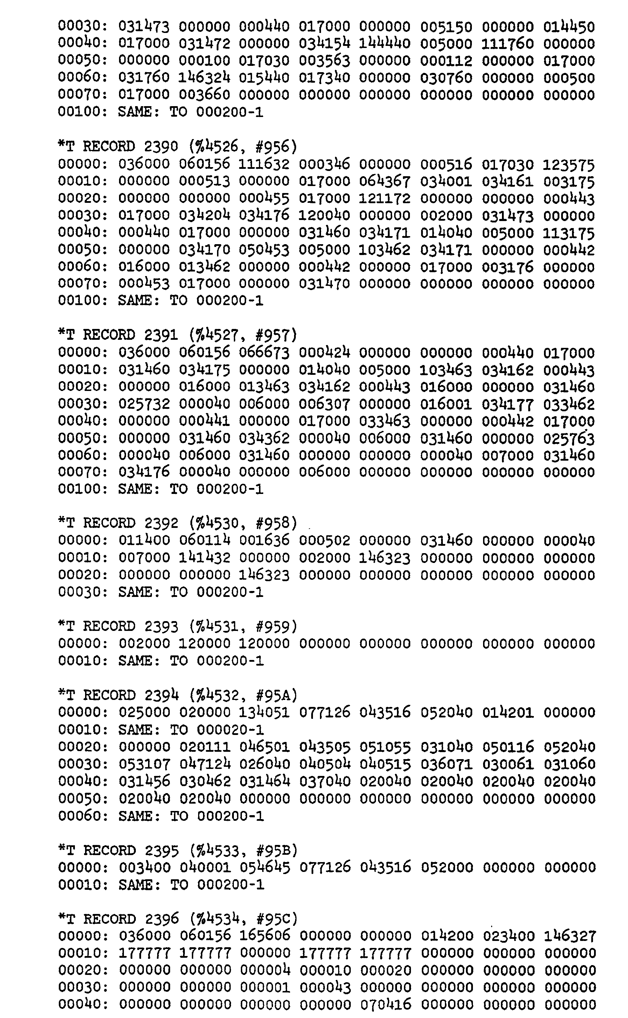

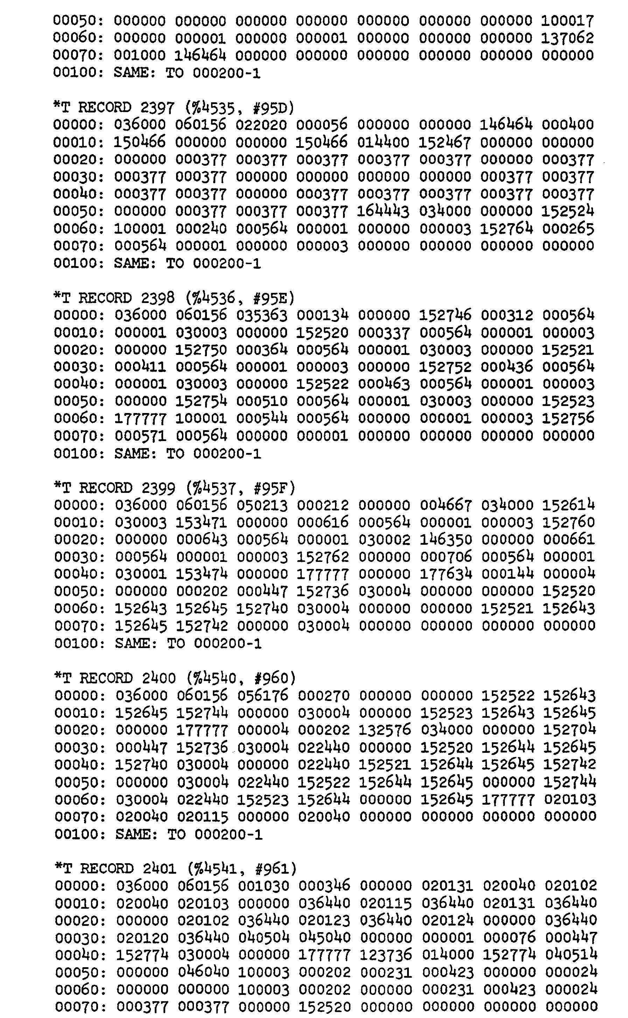

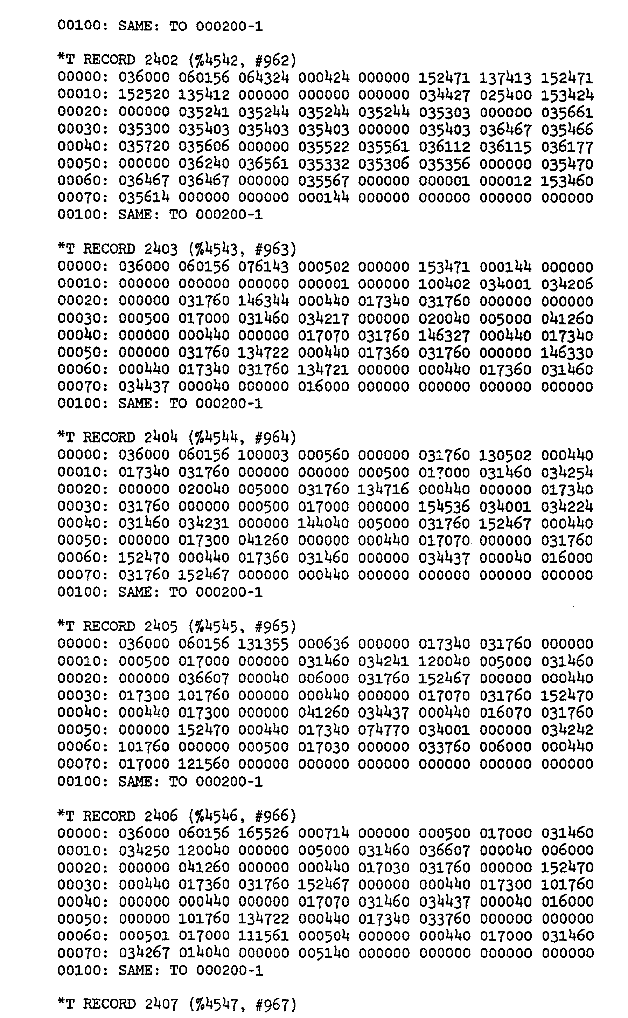

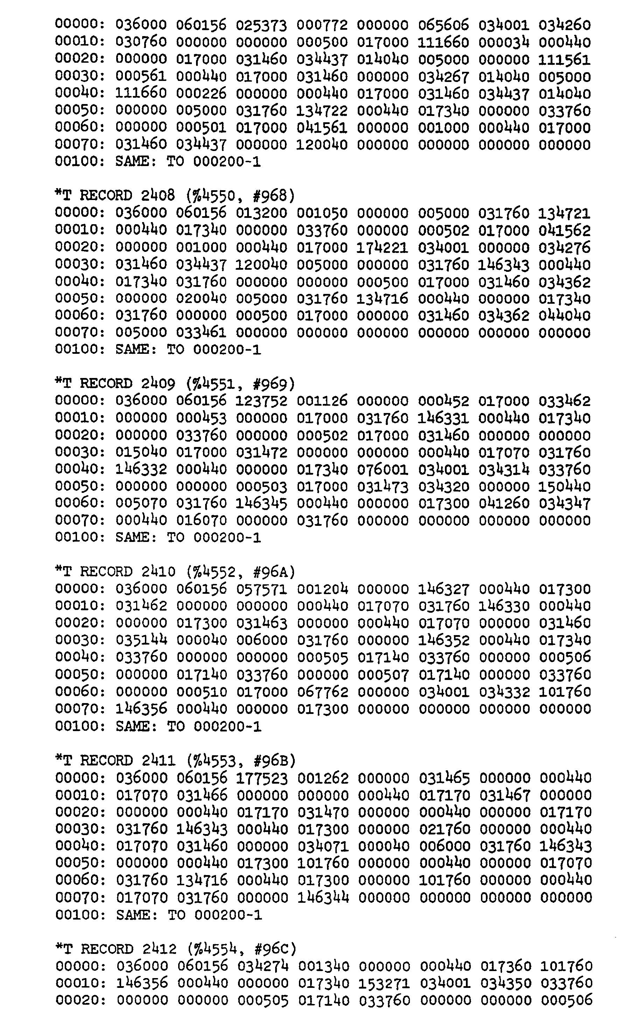

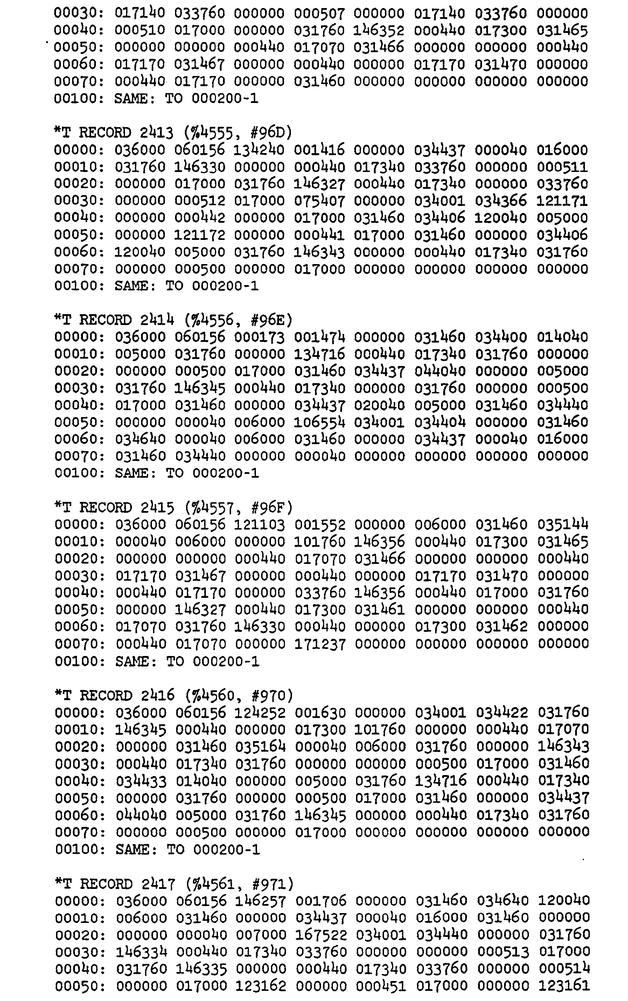

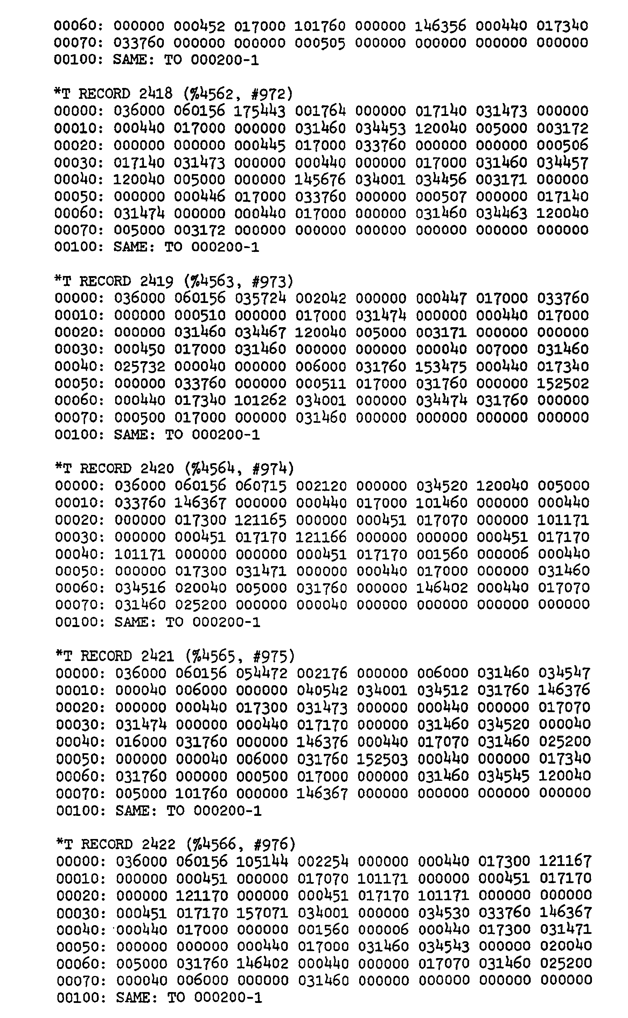

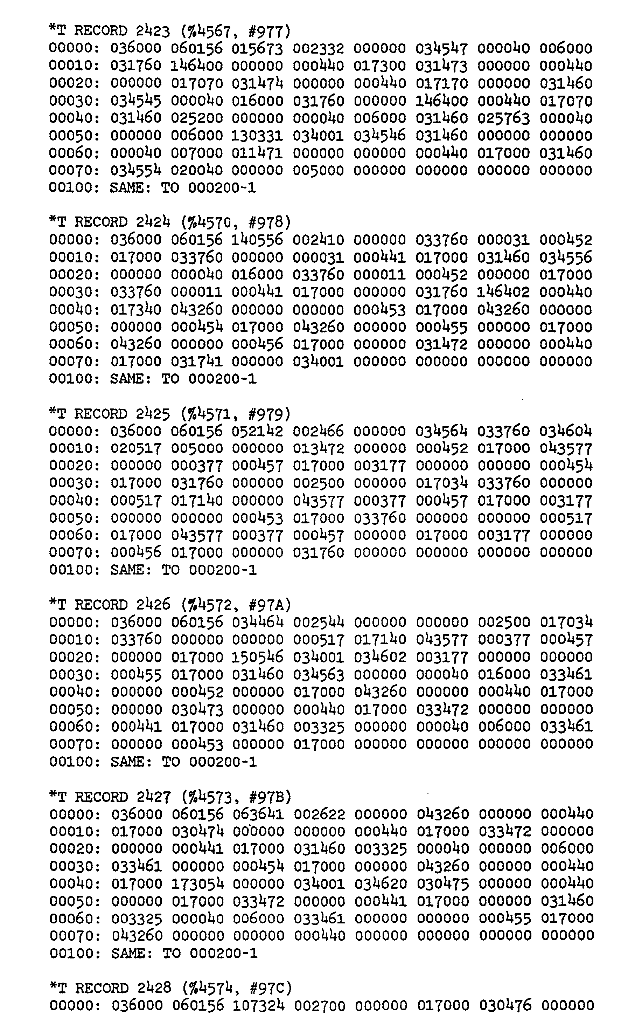

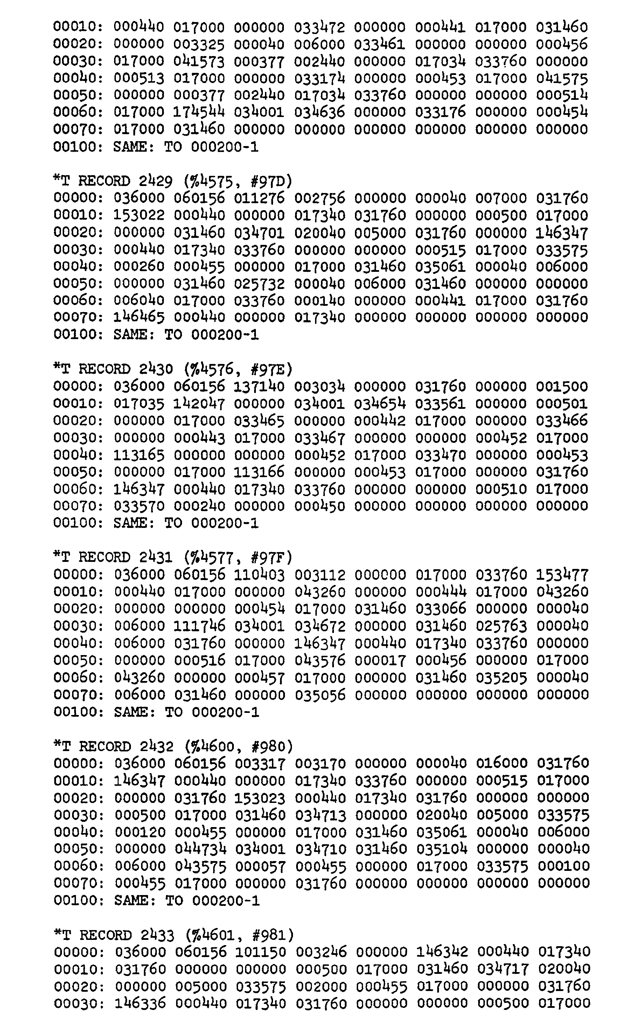

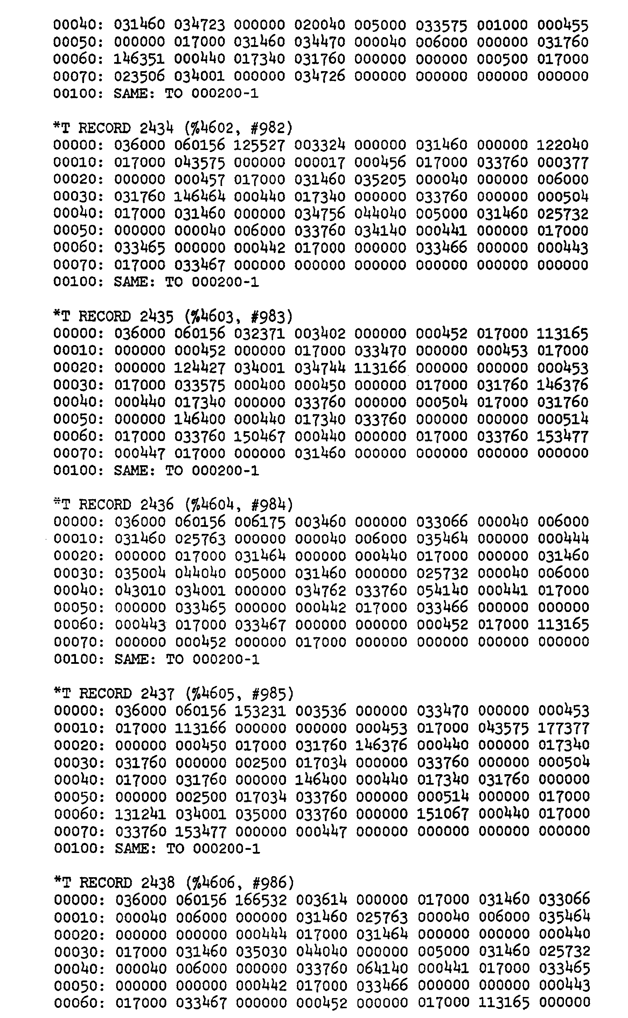

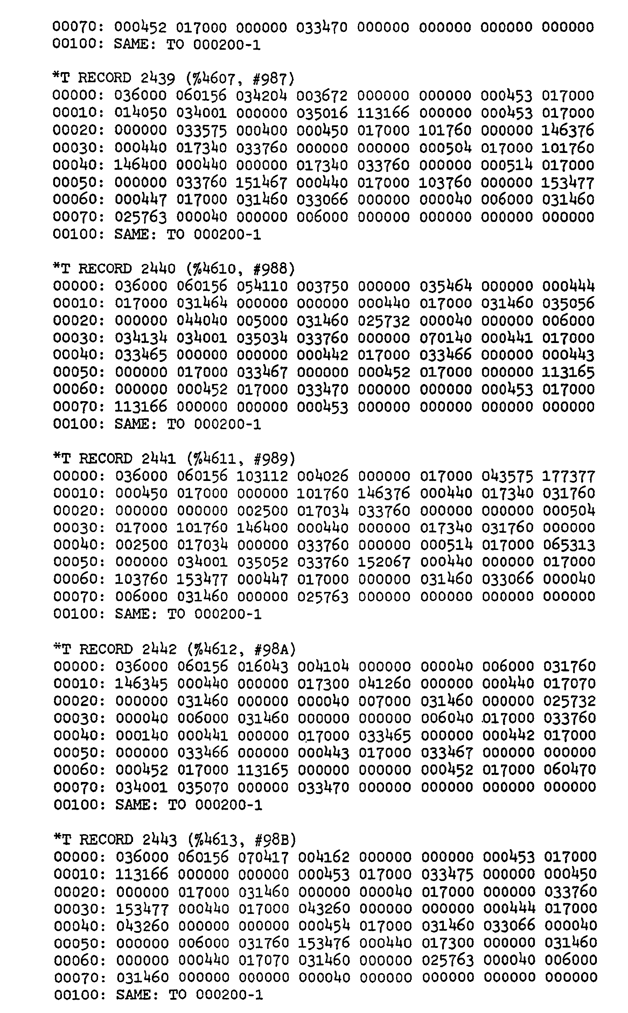

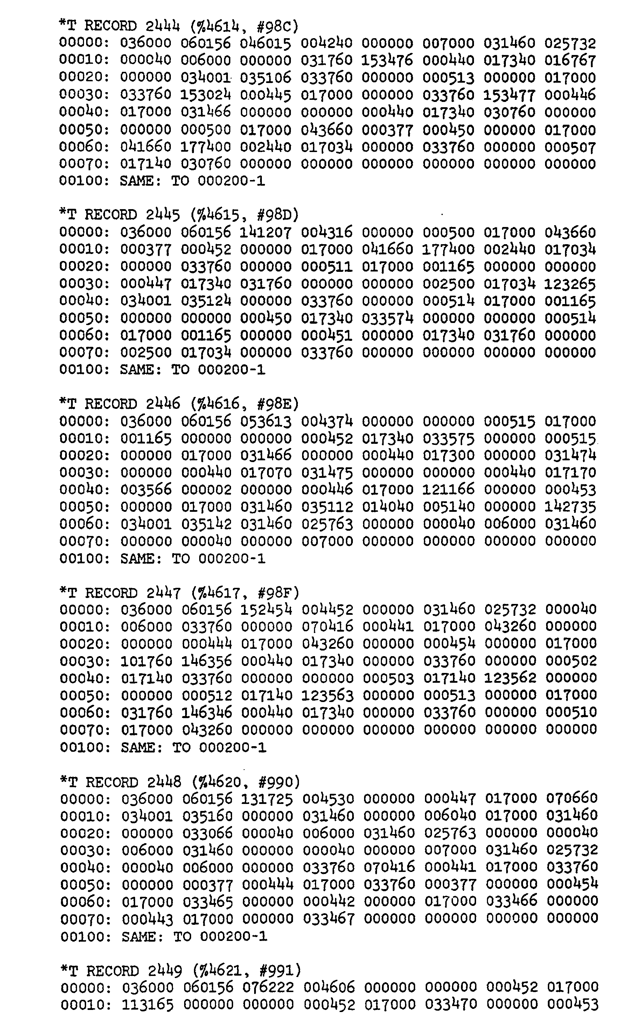

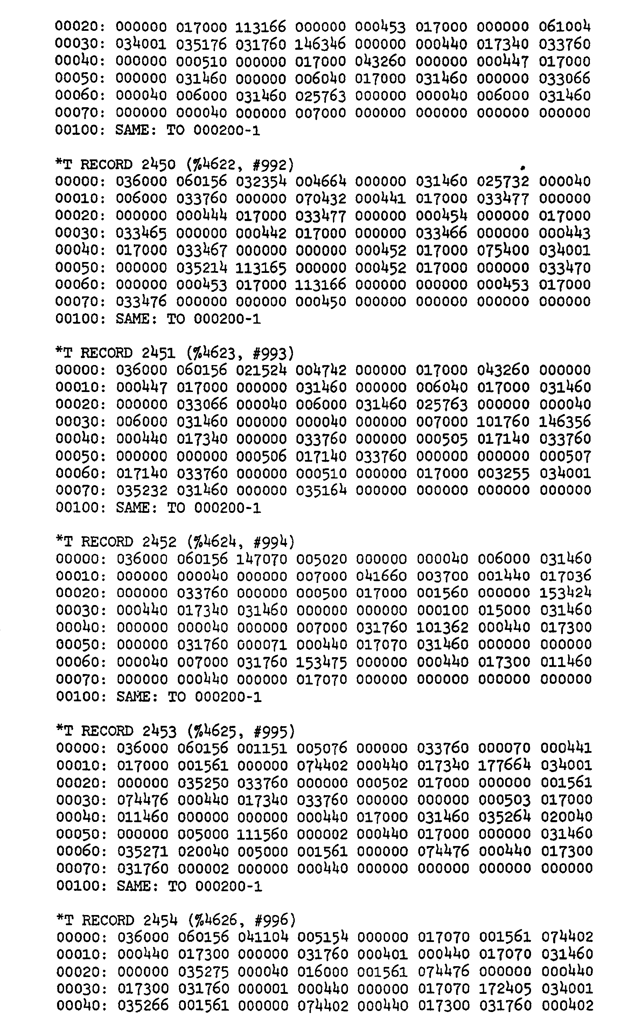

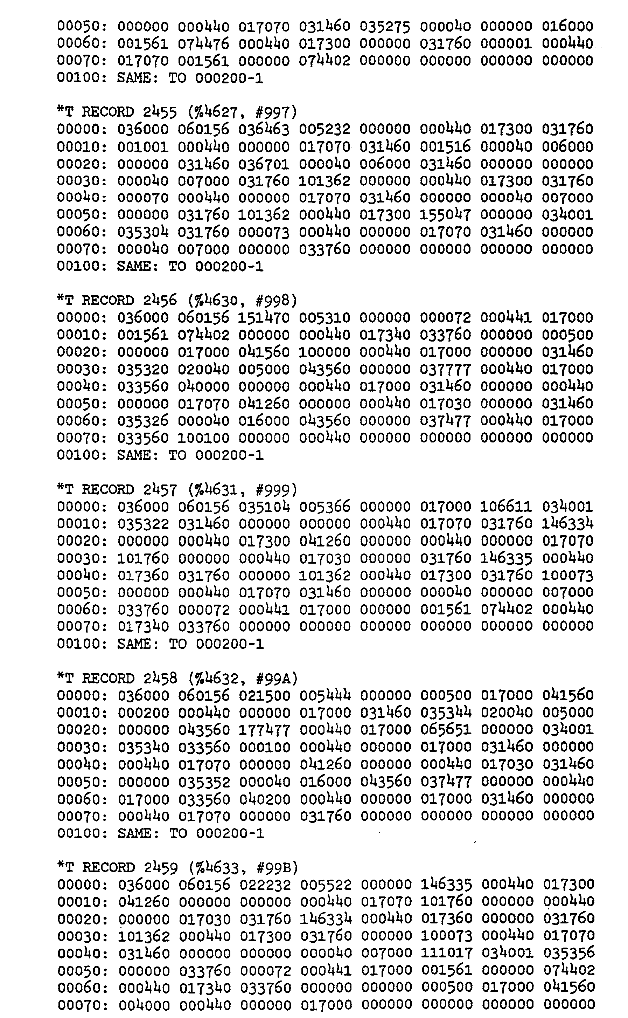

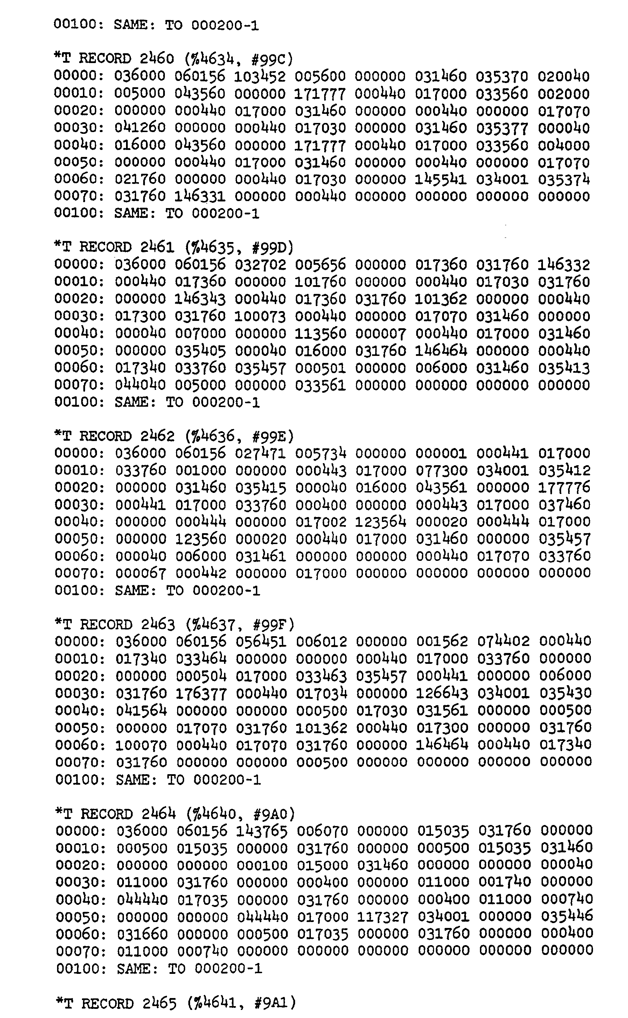

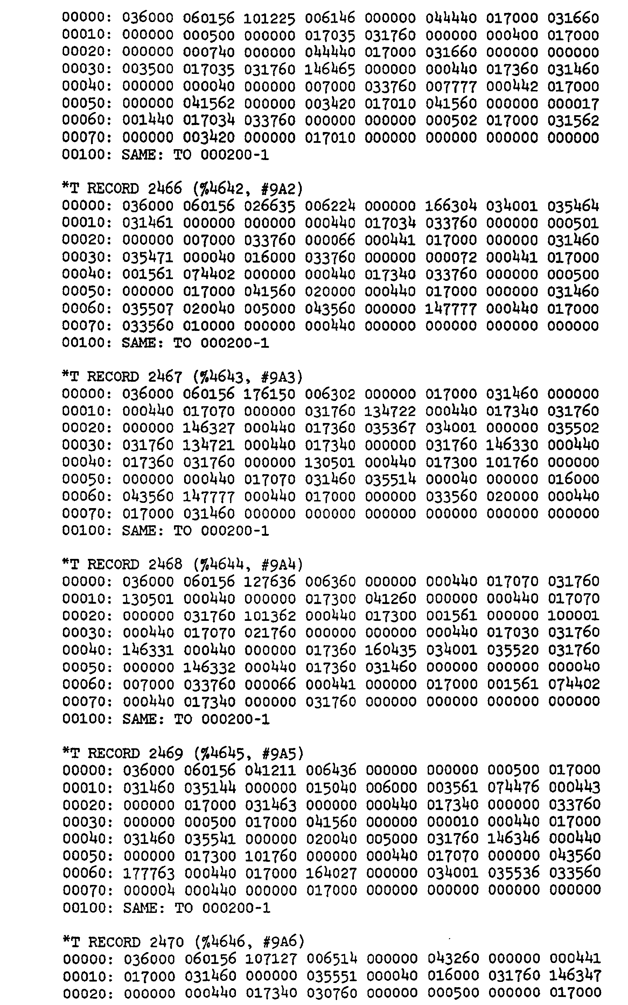

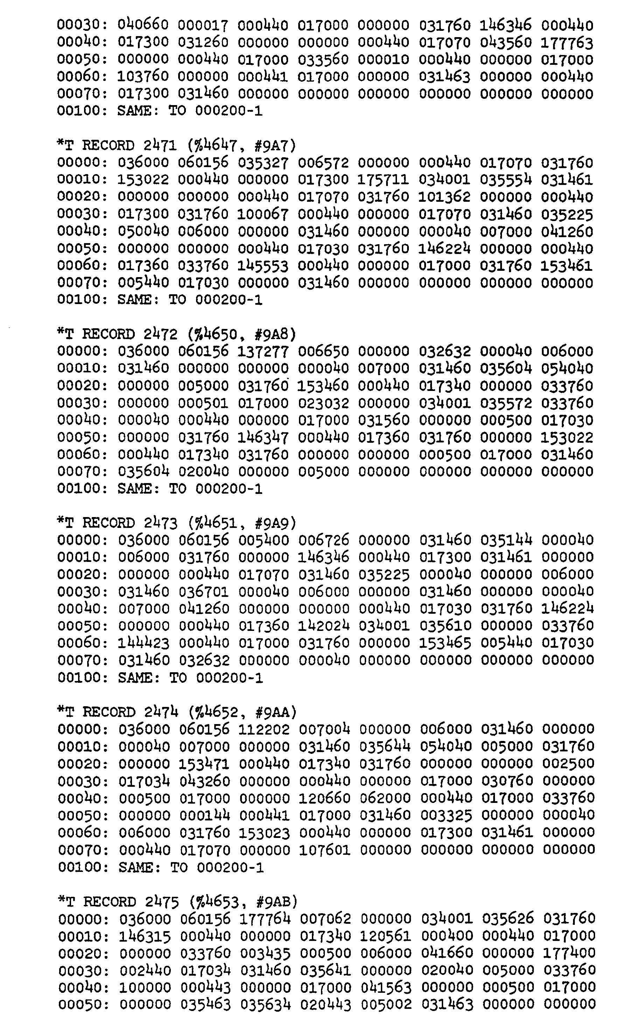

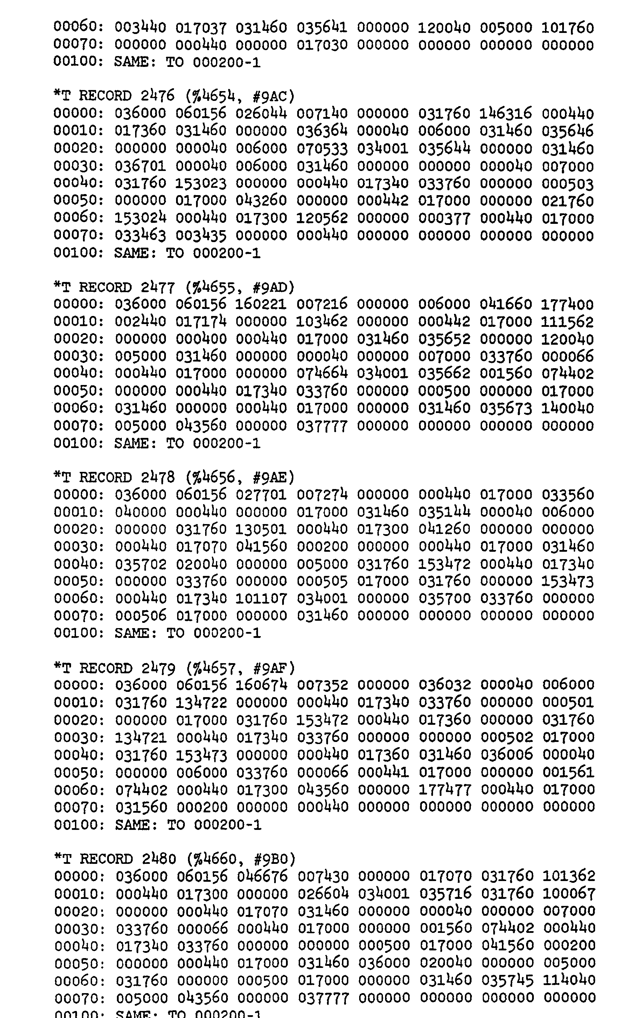

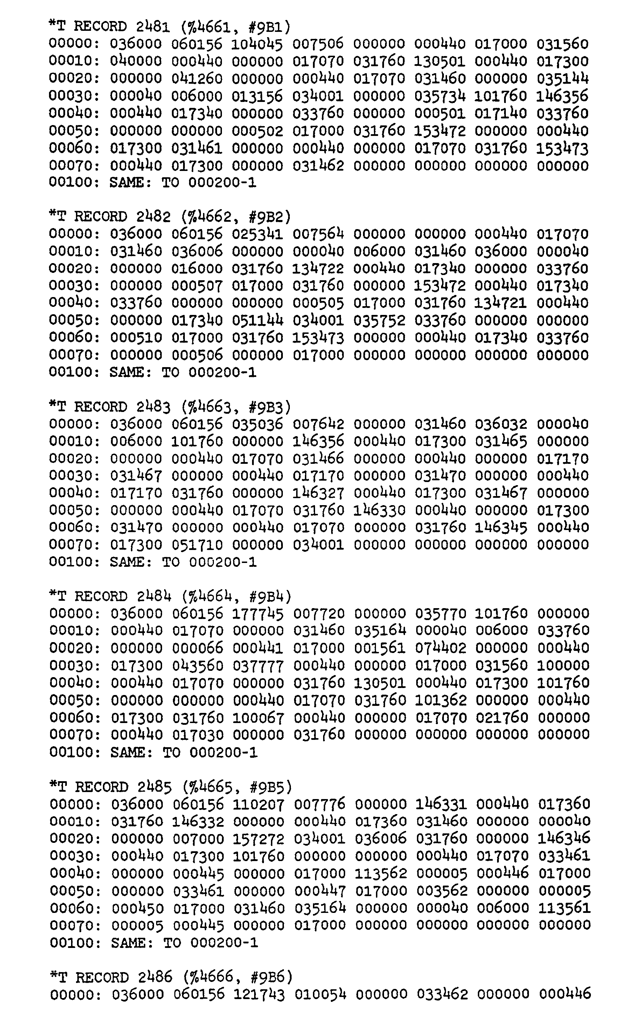

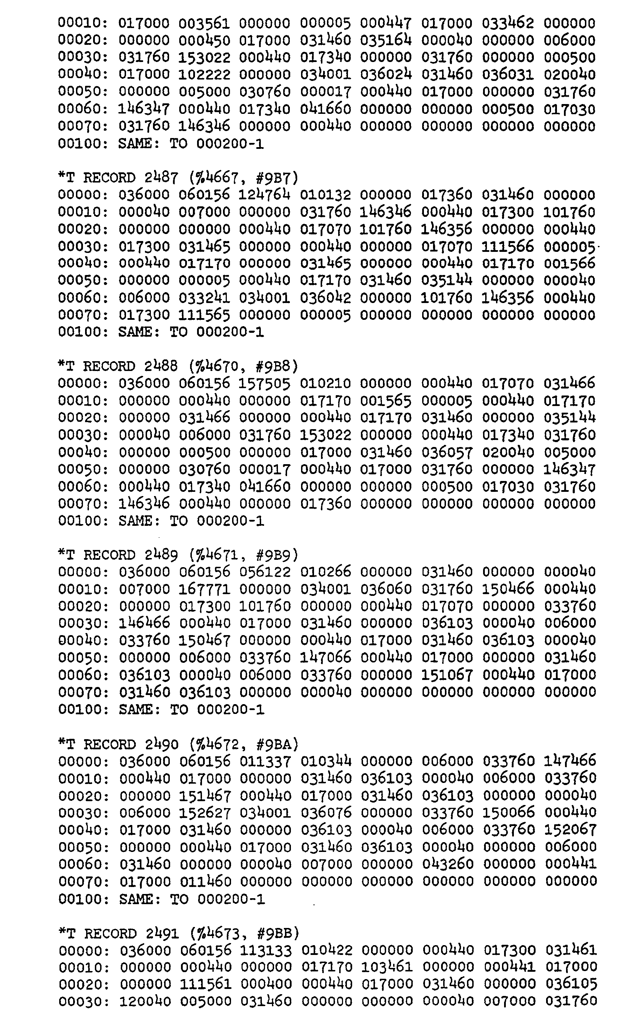

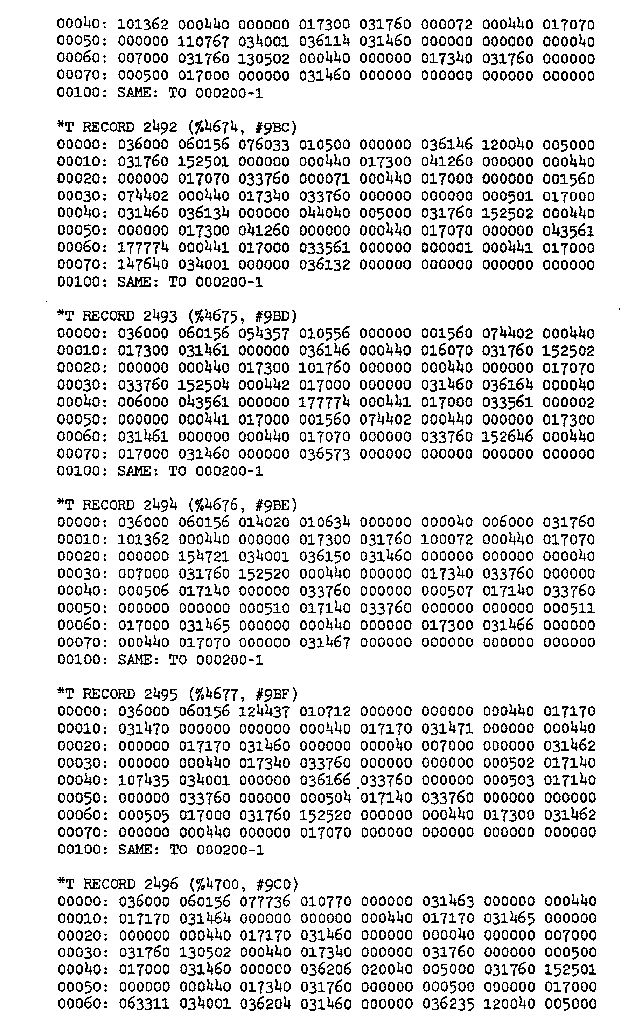

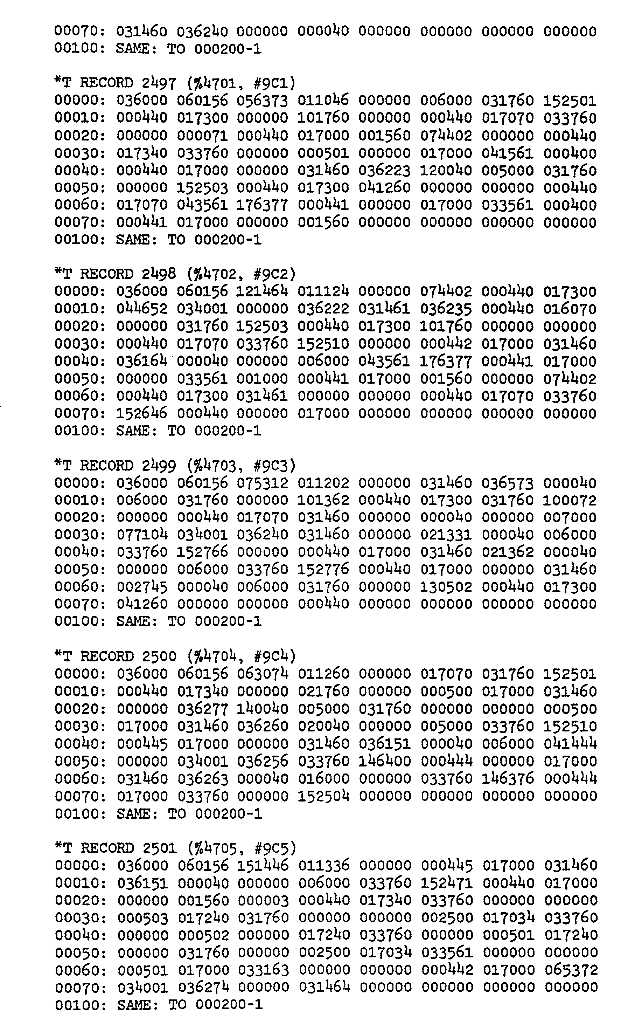

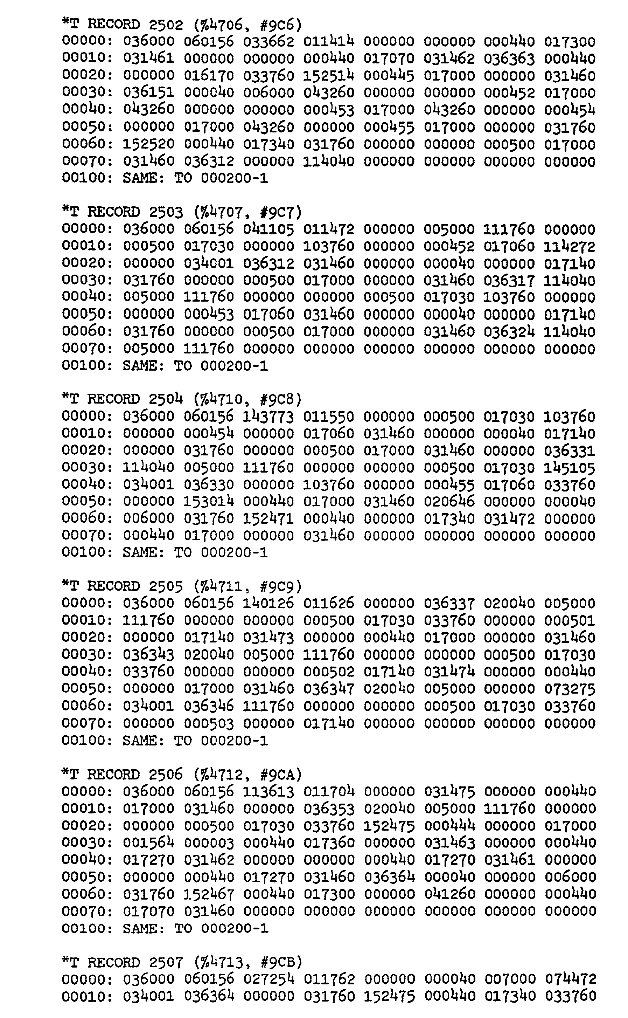

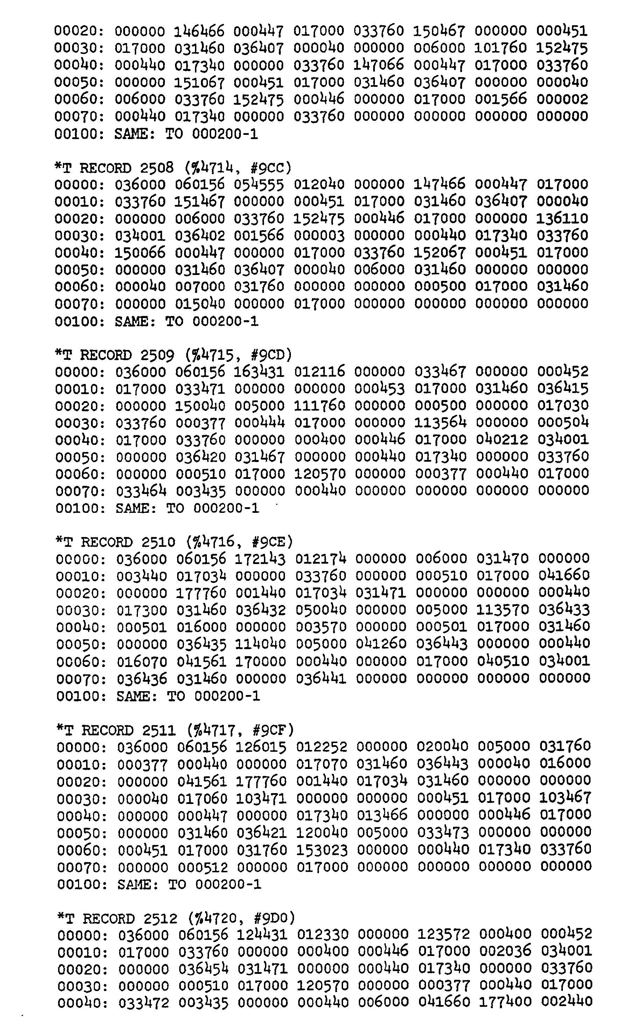

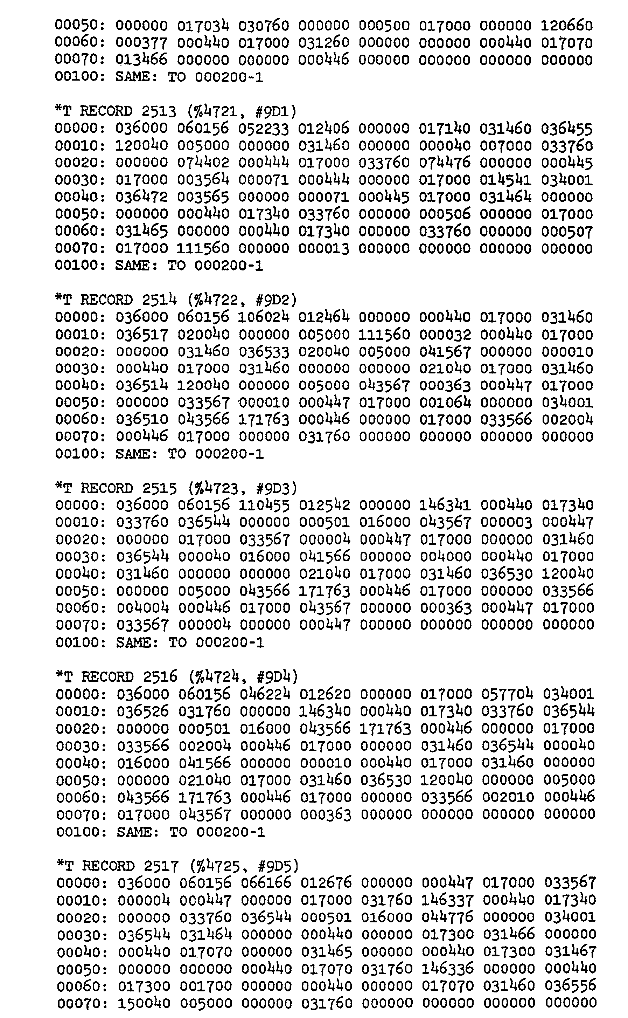

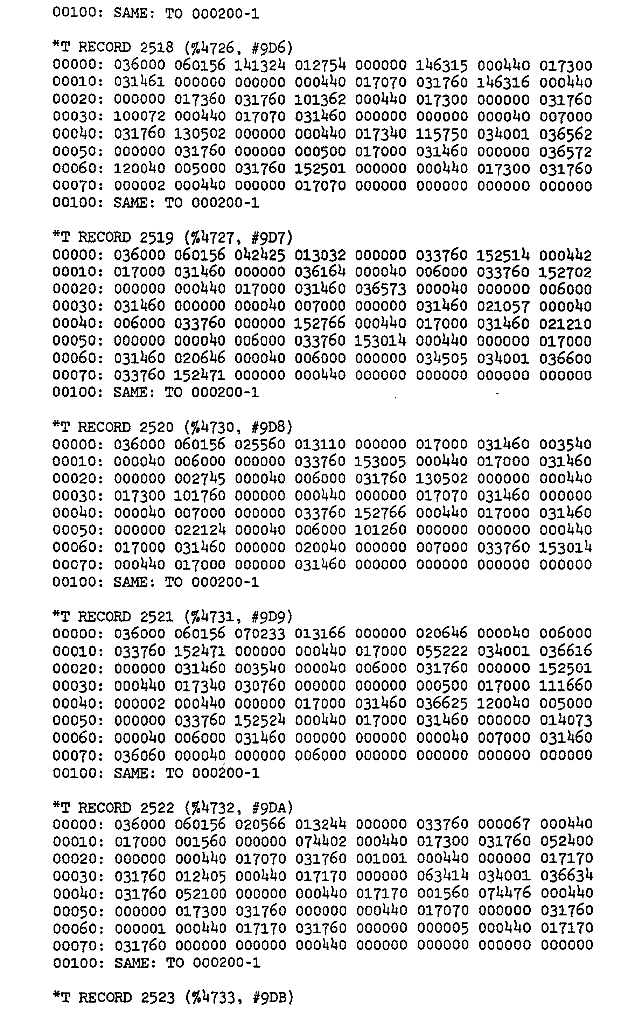

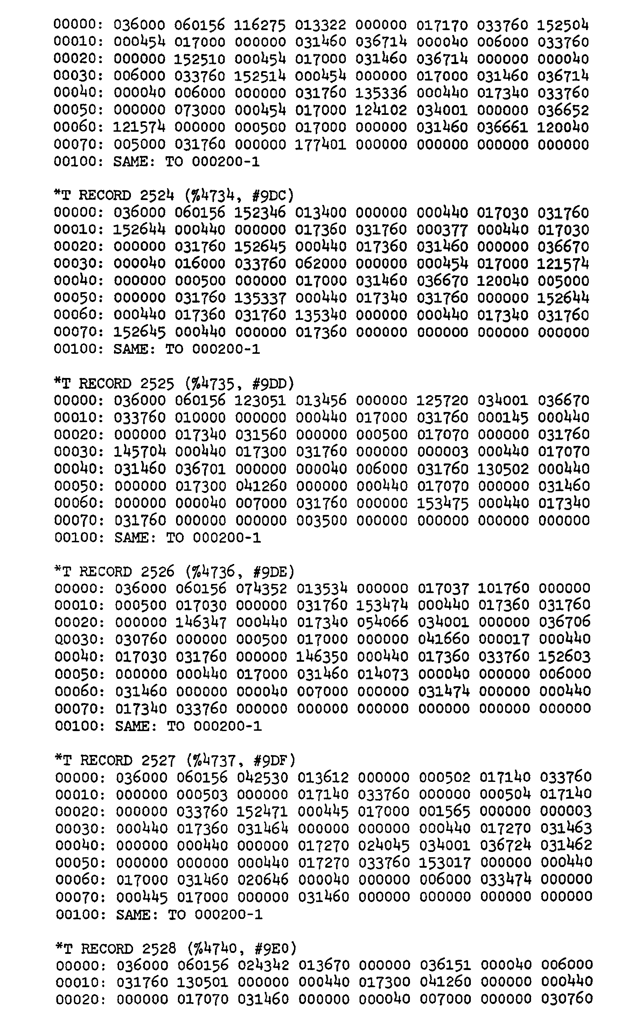

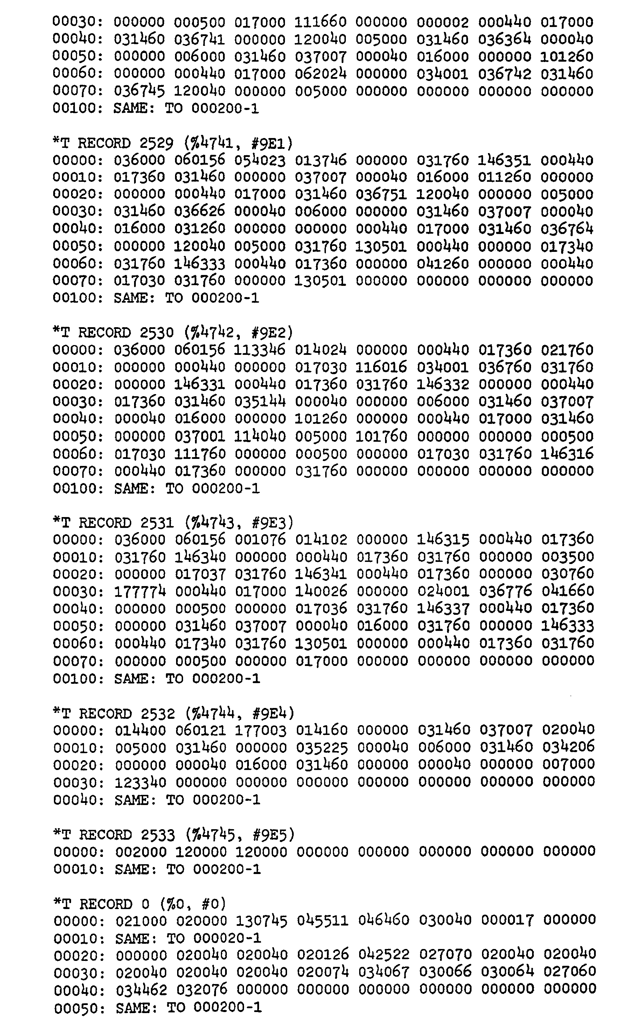

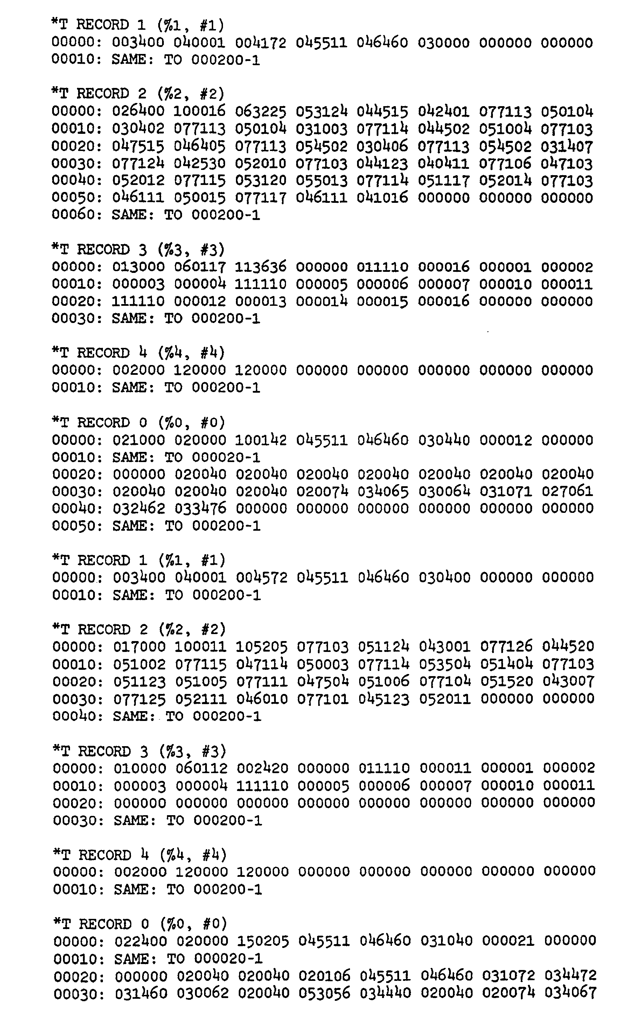

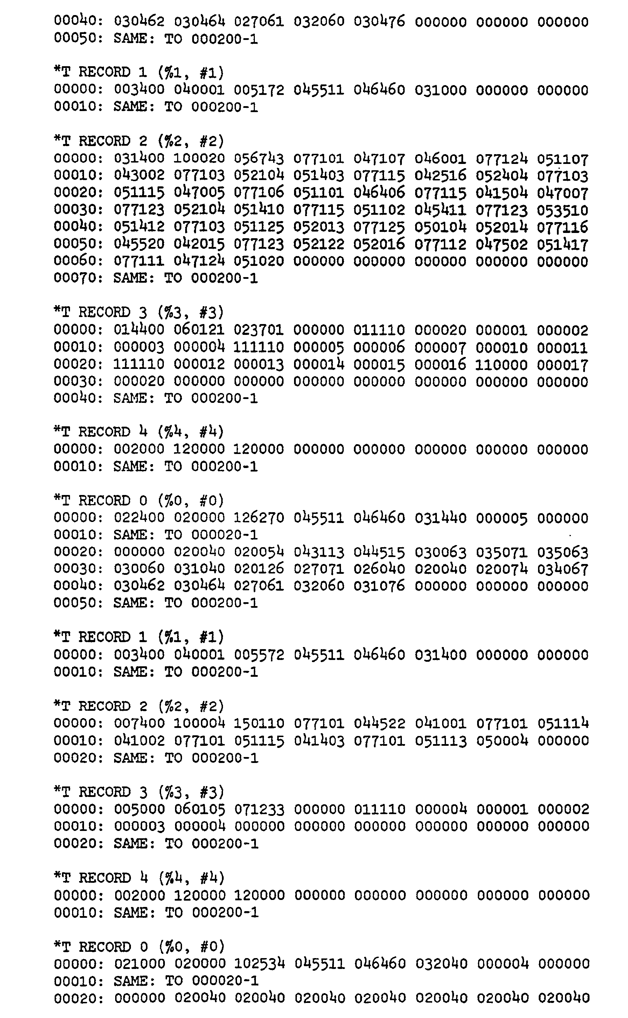

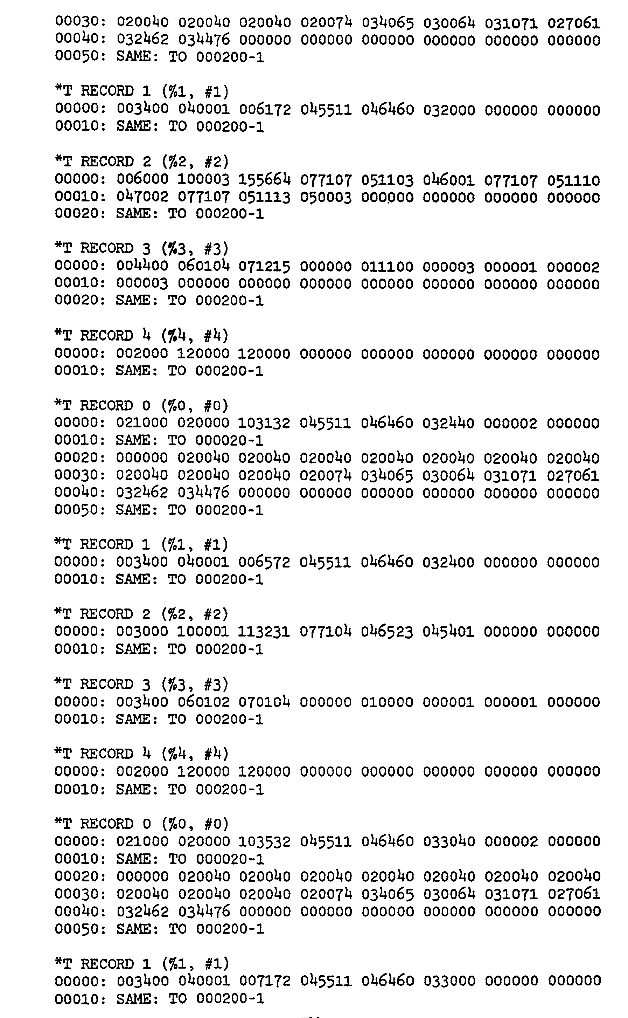

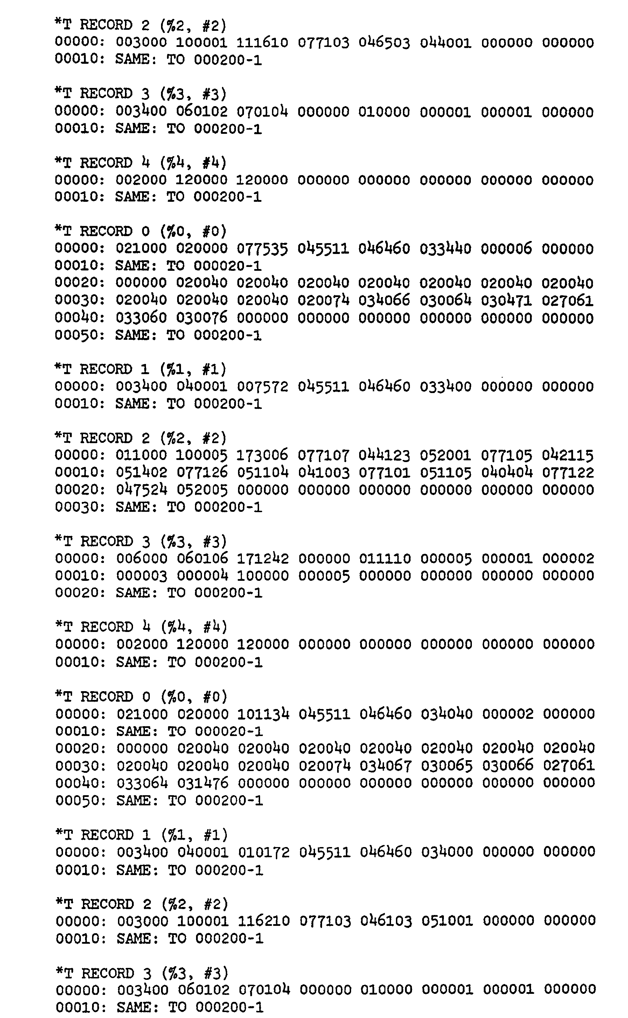

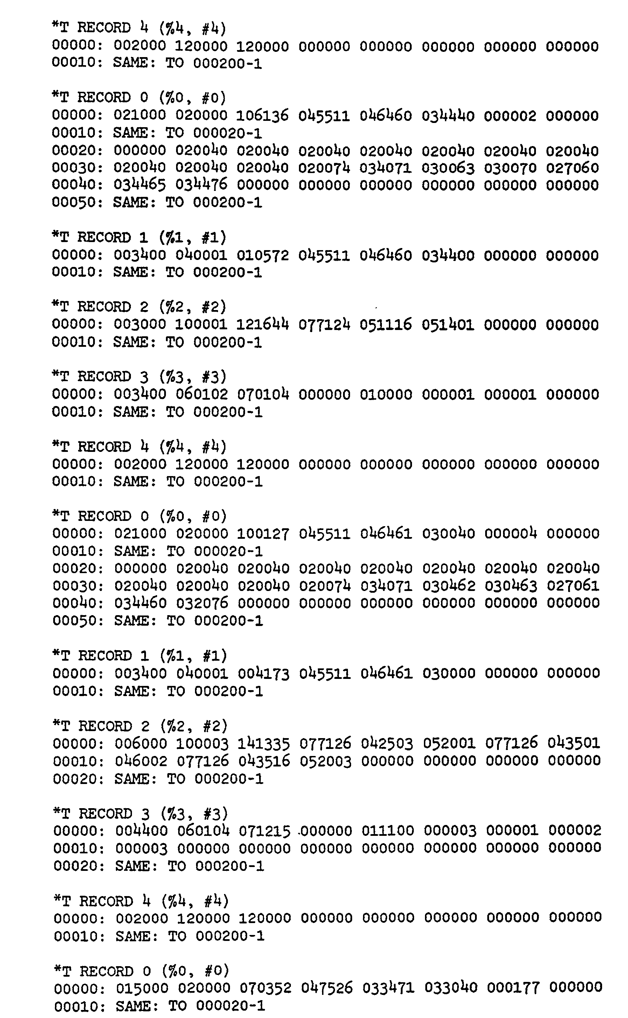

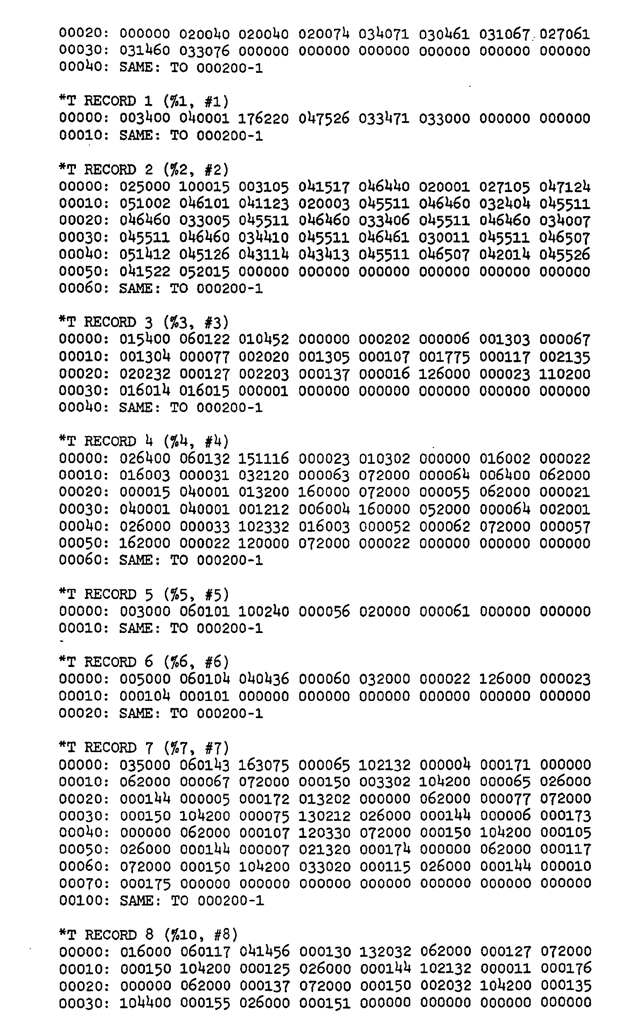

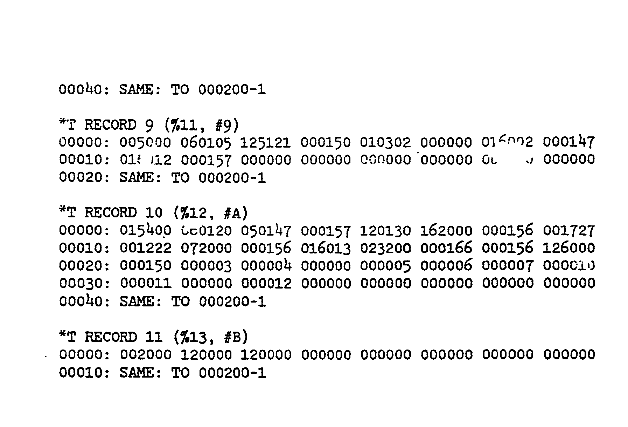

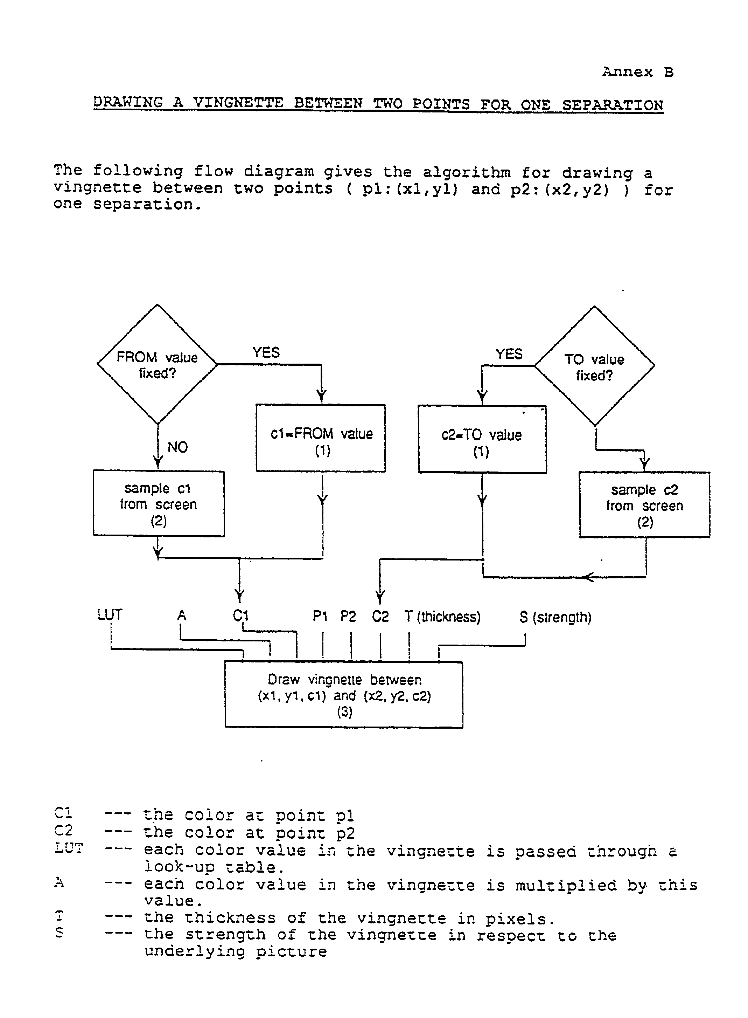

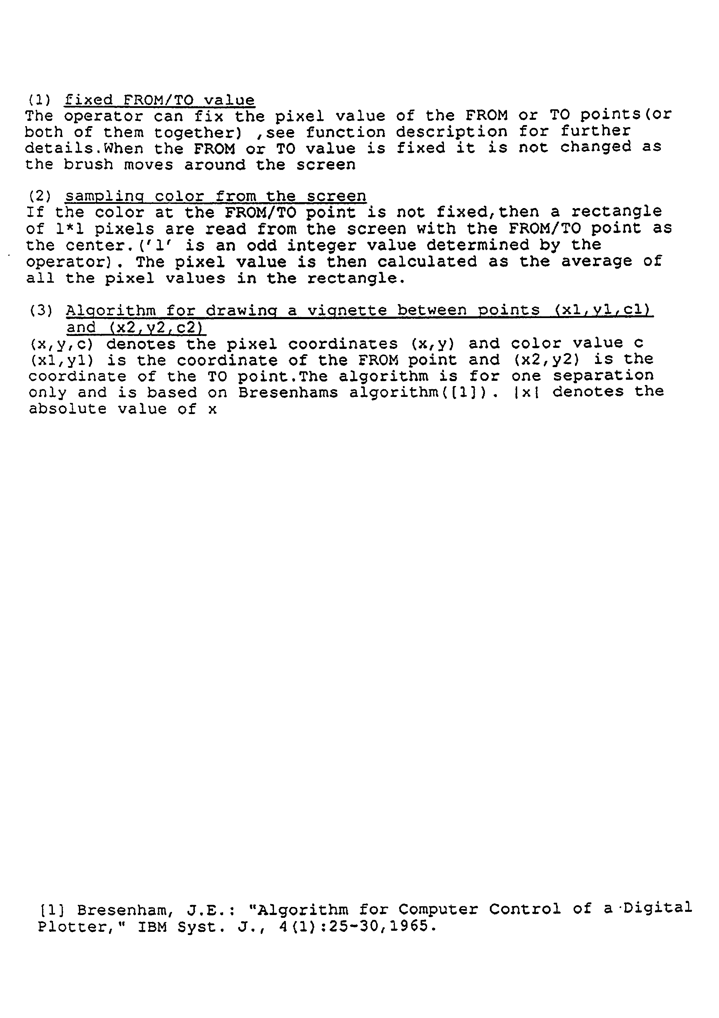

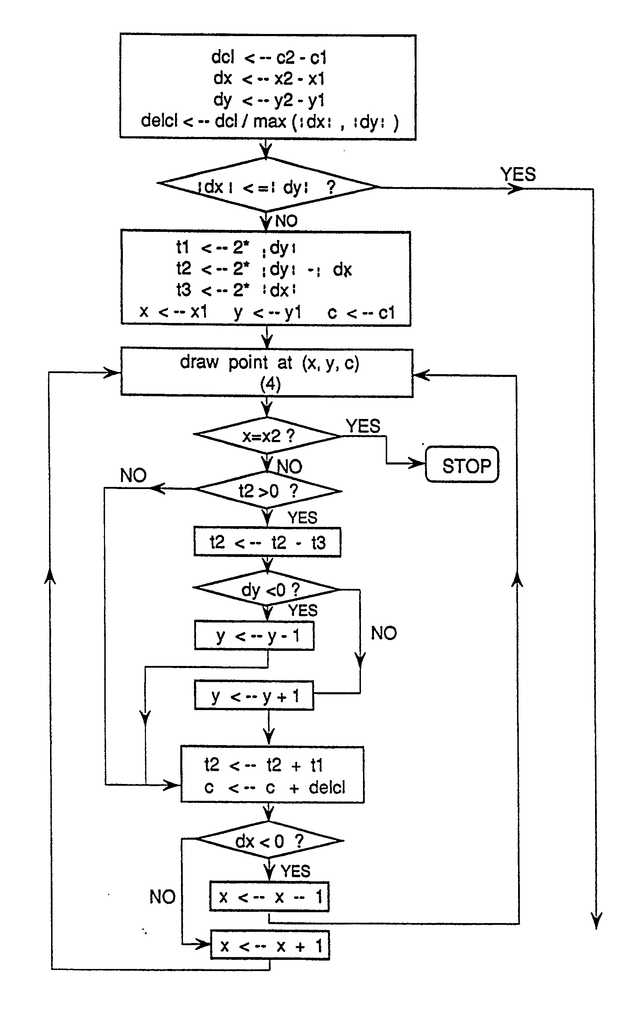

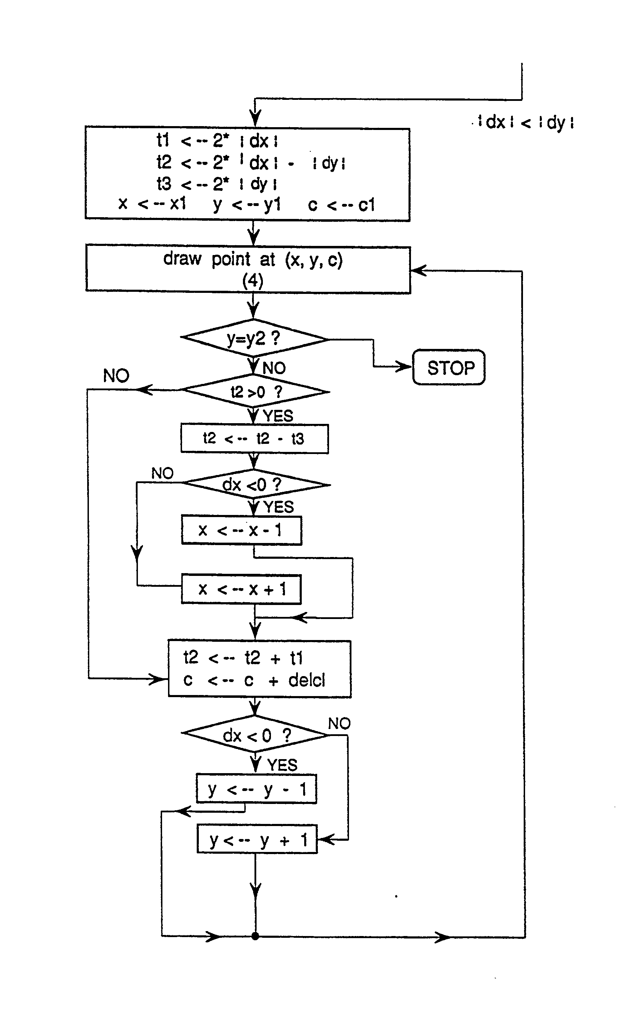

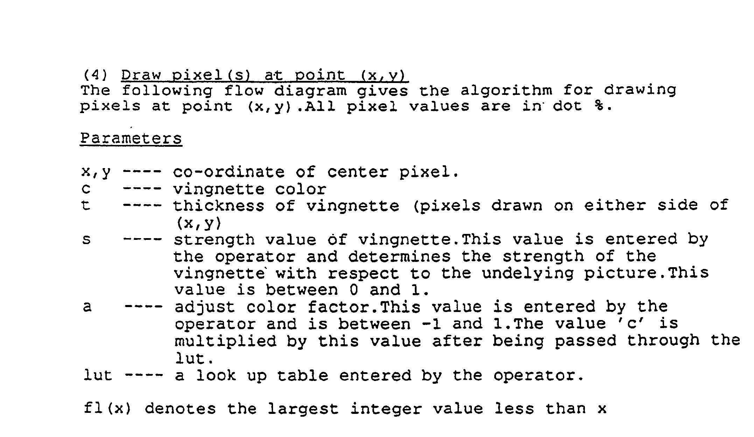

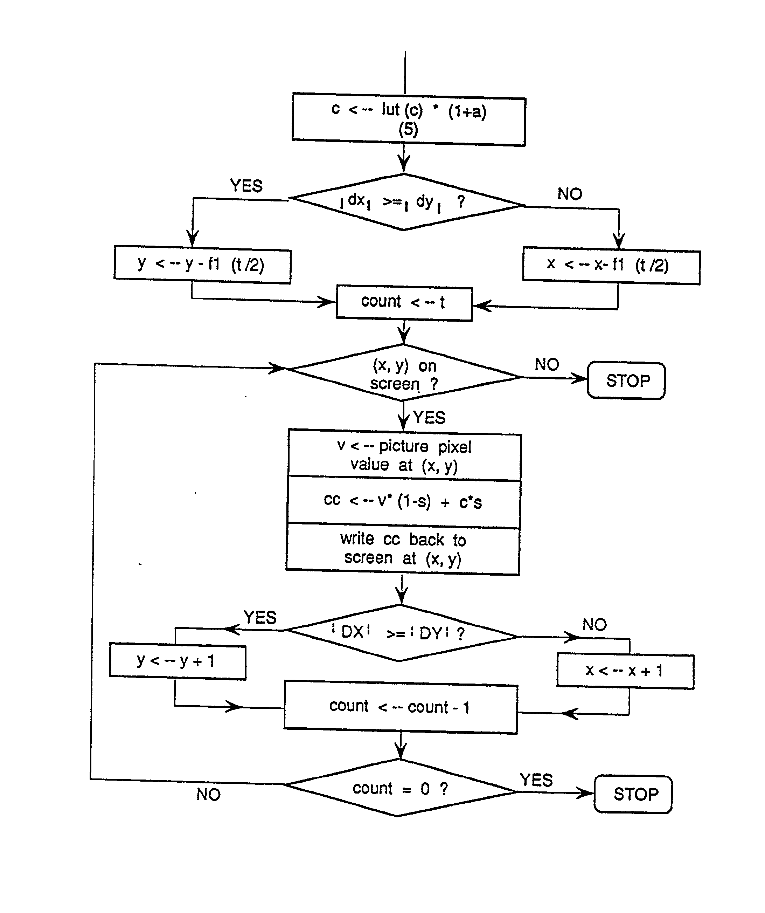

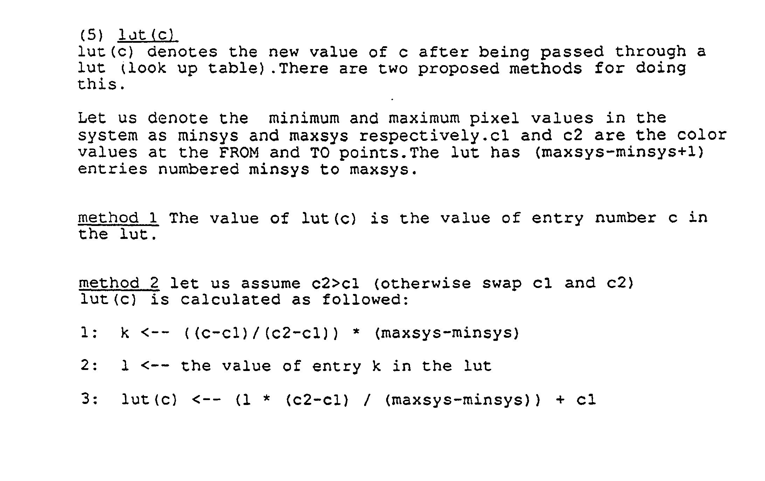

Fig. 10G is similar to Fig. 10F, but the TO array comprises 10 pixels and defines a closed circular curve, whereas the TO array of Fig. 10F defines an open curve.

It is appreciated that many different features of a retouch system are described herein and that any or all of these features may be combined in any suitable manner to obtain a wide variety of retouch options and retouch systems.

It will be apparent to persons skilled in the art that the present invention is not limited by what has been particularly shown and described hereinabove. Rather the scope of the present invention is defined only by the claims which follow:

**Claims**

1. A retouch system comprising:

   means for defining a color gradient brush having a longitudinal axis extending between two selected relative locations of an image;

   means for determining the width of the brush in a direction transverse to the longitudinal axis of the brush;

   means for determining a color sampling area at each of the two selected relative locations independently of the determination of the width of the brush; and

   means for moving the brush in a desired direction, such that color values defined for the color sampling areas at the two relative locations are translated along the image.

2. A retouch system comprising:

   means for defining a color gradient brush having a longitudinal axis extending between two selected relative locations of an image;

   means for selectably determining the color at at least one of the two selected relative locations, independently of the color appearing at the image at such locations; and

   means for moving the brush in a desired direction, such that the two relative locations are translated along the image.

3. A retouch system comprising:

   means for defining a color gradient brush having a longitudinal axis extending between two selected relative locations of an image and defining gradients for a plurality of color separations therealong;

   means for selectably determining the luminance weighting of at least one of the plurality of color separations relative to at least another of the plurality of color separations; and

   means for moving the brush in a desired direction, such that the two relative locations are translated along the image.

4. A retouch system comprising:

   means for defining a color gradient brush having a longitudinal axis extending between two selected relative locations of an image, including means for selectably determining the gradient between the two selected relative locations; and

   means for moving the brush in a desired direction, such that the two locations and the selectably determined gradient therebetween are translated along the image.

5. A retouch system comprising:

   means for defining a color gradient brush having a longitudinal axis extending between two selected relative locations of an image; and

   means for moving the brush in a rotational motion about a selected rotation location on the image.

6. A retouch method comprising the steps of:

   defining a color gradient brush having a longitudinal axis extending between two selected relative locations of an image;

   determining the width of the brush in a direction transverse to the longitudinal axis of the brush;

   determining the color sampling area at each of the two selected relative locations independently of the determination of the width of the brush; and

   moving the brush in a desired direction, such that the two relative locations are translated along the image.

7. A retouch method comprising the steps of:

   defining a color gradient brush having a longitudinal axis extending between two selected relative locations of an image;

   selectably determining the color at at least one of the two selected relative locations, independently of the color appearing at the image at such locations; and

   moving the brush in a desired direction, such that the two relative locations are translated along the image.

8. A retouch method comprising the steps of:

defining a color gradient brush having a longitudinal axis extending between two selected relative locations of an image;

defining gradients for a plurality of color separations therealong;

selectably determining the luminance weighting of at least one of the plurality of color separations relative to at least another of the plurality of color separations; and

moving the brush in a desired direction, such that the two relative locations are translated along the image.

9. A retouch method comprising the steps of:

defining a color gradient brush having a longitudinal axis extending between two selected relative locations of an image, including selectably determining the gradient between the two selected relative locations; and

moving the brush in a desired direction, such that the two locations and the selectably determined gradient therebetween are translated along the image.

10. A retouch method comprising the steps of:

defining a color gradient brush having a longitudinal axis extending between two selected relative locations of an image; and

moving the brush in a desired direction, such that the two relative locations are translated along the image, said step of moving the brush including moving the brush in a rotational motion about a selected rotation location on the image.

11. Apparatus for varying the grain of a color image comprising:

means for adding a random value to at least one separation of a plurality of pixels of a color image.

INPUT
DEVICES

CPU

DISK

LASER
PLOTTER

FIG. 1A

SELECT
"FROM"  "TO"

SELECT COLOR
AT 1st -2st
LOCATION

CPU

SELECT
GRADIENT

COLOR
WEIGHTING

POINT OF
ROTATION

SELECT
TYPE OF
MOTION

FIG 1B

FIG 1E

FIG 1D

FIG1C

30

FIG 2A

FIG 2C

FIG 2B

FIG 2D

FIG 2E

FIG 3A

FIG 3B

FIG 4A

FIG 4B

FIG 4C

FIG. 5A

LUMINANCE

+SCURVE - III

NORMAL - I

LUMINANCE
100

II

0

FIG. 5B

## FIG 5C

## FIG 5D

FIG 6A

**6B**

**6C**

FIG 6D

FIG 7A

FIG 7B

FIG 7C

FIG 7D

FIG 8A

1st
TO press a          next
                    press
                    b

FROM

TO

FROM

FIG 9A

# FIG 8B

# FIG 8C

## FIG 9B

## FIG 9C

40    42    44    46    48    FROM

FIG. 10A

TO

50    52    54    56    58

40    42    44    46    48    FROM

FIG. 10B

TO

50    52    54    56    58

62    64    66

60    62    64    66    68    FROM

FIG. 10C

TO

70    72    74    76    78

FROM 80

TO  82    84    86    88    90

FIG. 10D

FROM  92    94    96    98    100

104

TO  106

108

110

FIG. 10E

FROM 80

82    84    86    88    90

TO

FIG. 10F

TO

TO

TO

TO → ●

● ← TO

FROM

TO

TO

TO

TO

TO

TO

FIG. 10G

```
*T RECORD 0 (%0, #0)
00000: 016000 020000 012514 047526 034461 030440 000023 000000
00010: SAME: TO 000020-1
00020: 000000 020040 020136 022120 053116 020074 034071 030461
00030: 031062 027060 032460 030476 000000 000000 000000 000000
00040: SAME: TO 000200-1

*T RECORD 1 (%1, #1)
00000: 003400 040001 174610 047526 034461 030400 000000 000000
00010: SAME: TO 000200-1

*T RECORD 2 (%2, #2)
00000: 006000 100003 160275 046101 041123 020001 040467 052120
00010: 047002 027105 047124 051003 000000 000000 000000 000000
00020: SAME: TO 000200-1

*T RECORD 3 (%3, #3)
00000: 004000 060103 062503 000000 000200 000001 002173 000004
00010: 000000 000000 000000 000000 000000 000000 000000 000000
00020: SAME: TO 000200-1

*T RECORD 4 (%4, #4)
00000: 015000 060117 161555 000004 010332 000000 016003 000003
00010: 162000 000003 072000 000003 102330 016001 000014 000022
00020: 072000 000017 016002 020320 000021 000000 000003 126000
00030: 000004 000104 000000 000000 000000 000000 000000 000000
00040: SAME: TO 000200-1

*T RECORD 5 (%5, #5)
00000: 002000 120000 120000 000000 000000 000000 000000 000000
00010: SAME: TO 000200-1

*T RECORD 0 (%0, #0)
00000: 016000 020000 030364 047526 034461 031040 000023 000000
00010: SAME: TO 000020-1
00020: 000000 020040 020124 050126 047040 036070 034461 030462
00030: 031056 030065 030062 037040 000000 000000 000000 000000
00040: SAME: TO 000200-1

*T RECORD 1 (%1, #1)
00000: 003400 040001 175210 047526 034461 031000 000000 000000
00010: SAME: TO 000200-1

*T RECORD 2 (%2, #2)
00000: 006000 100003 153275 046101 041123 020001 040467 052120
00010: 042002 027105 047124 051003 000000 000000 000000 000000
00020: SAME: TO 000200-1

*T RECORD 3 (%3, #3)
00000: 004000 060103 062504 000000 000200 000001 002174 000004
00010: 000000 000000 000000 000000 000000 000000 000000 000000
00020: SAME: TO 000200-1

*T RECORD 4 (%4, #4)
00000: 015000 060117 161555 000004 010332 000000 016003 000003
00010: 162000 000003 072000 000003 102330 016001 000014 000022
00020: 072000 000017 016002 020320 000021 000000 000003 126000
```

```
00030: 000004 000104 000000 000000 000000 000000 000000 000000
00040: SAME: TO 000200-1

*T RECORD 5 (%5, #5)
00000: 002000 120000 120000 000000 000000 000000 000000 000000
00010: SAME: TO 000200-1

*T RECORD 0 (%0, #0)
00000: 031000 160130 102471 000000 000000 000000 011725 000000
00010: 000000 000007 000000 000000 000000 000000 000000 000000
00020: SAME: TO 000030-1
00030: 013003 040467 052120 047040 020101 042101 046440 020062
00040: 020120 047511 047124 020126 044516 020101 033524 050116
00050: 035072 031460 030063 020074 034460 030462 030466 027060
00060: 034464 032476 000000 000000 000000 000000 000000 000000
00070: SAME: TO 000200-1

*T RECORD 1 (%1, #1)
00000: 005000 160201 151354 000001 000000 007300 000003 040467
00010: 052120 047040 000000 000000 000000 000000 000000 000000
00020: SAME: TO 000200-1

*T RECORD 2 (%2, #2)
00000: 076000 160432 033517 000036 000002 027106 051502 000031
00010: 000002 027106 046520 000004 000003 027105 044517 027040
00020: 000005 000003 027111 044517 027040 000006 000003 027104
00030: 052101 027040 000001 000003 027105 047124 051040 000003
00040: 000002 027103 050115 000043 000003 027101 051124 047040
00050: 000055 000002 046511 047060 000056 000002 046501 054060
00060: 000007 000003 027105 054111 052040 000030 000003 045531
00070: 050104 044440 000015 000003 045526 043522 047440 000061
00100: 000003 051524 040503 045440 000047 000002 041105 046114
00110: 000037 000003 047503 046101 051040 000035 000003 047527
00120: 042502 050040 000060 000003 046502 043520 051040 000062
00130: 000002 041501 046114 000057 000003 047520 053501 044440
00140: 000054 000003 045111 046522 041040 000040 000003 047527
00150: 040522 042440 000023 000002 054506 044517 000053 000003
00160: 054515 047107 051040 000052 000003 044111 047101 030440
00170: 000051 000002 045515 053127 000000 000000 000000 000000

*T RECORD 3 (%3, #3)
00000: 074000 160430 142646 000050 000003 042532 043514 047040
00010: 000025 000003 054523 042524 053040 000032 000003 054523
00020: 050522 052040 000026 000003 047504 051520 041440 000046
00030: 000002 053101 044524 000045 000003 047502 052524 051440
00040: 000044 000003 047527 042520 052040 000042 000003 047502
00050: 054120 047040 000041 000003 040467 052120 046440 000034
00060: 000003 053527 040511 052040 000033 000003 045115 043514
00070: 042040 000027 000003 040467 042103 047040 000024 000003
00100: 047527 042515 050040 000022 000003 045523 054523 043040
00110: 000021 000003 045516 051531 051440 000020 000003 045526
00120: 043515 046440 000002 000002 046101 041123 000017 000003
00130: 045523 041523 054040 000016 000003 045523 041523 054440
00140: 000014 000003 047520 040511 052040 000013 000003 045511
00150: 047111 046440 000012 000003 045526 043503 045440 000011
00160: 000003 052516 051524 045440 000010 000002 045523 054523
00170: 000000 000000 000000 000000 000000 000000 000000 000000
```

37

```
*T RECORD 4 (%4, #4)
00000: 077400 160300 046200 000001 000000 002221 060140 000000
00010: 000000 000000 000000 000000 000000 000001 000001 000001
00020: 000001 000000 000001 000001 000001 000002 000000 000002
00030: 000002 000002 000002 000000 000002 000003 000003 000003
00040: 000000 000003 000003 000004 000004 000000 000004 000004
00050: 000005 000005 000000 000005 000005 000006 000006 000000
00060: 000006 000006 000007 000007 000000 000007 000010 000010
00070: 000011 000000 000011 000011 000012 000012 000000 000013
00100: 000013 000014 000014 000000 000015 000015 000016 000016
00110: 000000 000017 000017 000020 000021 000000 000021 000022
00120: 000023 000023 000000 000024 000025 000025 000026 000000
00130: 000027 000030 000031 000031 000000 000032 000033 000034
00140: 000035 000000 000036 000037 000040 000041 000000 000042
00150: 000043 000044 000045 000000 000046 000050 000051 000052
00160: 000000 000053 000054 000056 000057 000000 000060 000062
00170: 000063 000065 000000 000066 000070 000071 000073 000000

*T RECORD 5 (%5, #5)
00000: 077400 160300 100242 000001 000000 002361 060140 000000
00010: 000074 000076 000077 000101 000000 000103 000104 000106
00020: 000110 000000 000112 000114 000115 000117 000000 000121
00030: 000123 000125 000127 000000 000131 000134 000136 000140
00040: 000000 000142 000144 000147 000151 000000 000153 000156
00050: 000160 000163 000000 000165 000170 000172 000175 000000
00060: 000200 000202 000205 000207 000000 000212 000215 000217
00070: 000221 000000 000224 000226 000231 000233 000000 000235
00100: 000237 000242 000244 000000 000246 000250 000252 000254
00110: 000000 000256 000260 000262 000264 000000 000266 000267
00120: 000271 000273 000000 000275 000276 000300 000302 000000
00130: 000303 000305 000306 000310 000000 000311 000313 000314
00140: 000316 000000 000317 000320 000322 000323 000000 000324
00150: 000326 000327 000330 000000 000331 000332 000333 000334
00160: 000000 000335 000336 000340 000341 000000 000341 000342
00170: 000343 000344 000000 000345 000346 000347 000350 000000

*T RECORD 6 (%6, #6)
00000: 077400 160300 102212 000001 000000 002521 060140 000000
00010: 000350 000351 000352 000353 000000 000353 000354 000355
00020: 000355 000000 000356 000357 000357 000360 000000 000361
00030: 000361 000362 000362 000000 000363 000363 000364 000364
00040: 000000 000365 000365 000365 000366 000000 000366 000367
00050: 000367 000367 000000 000370 000370 000370 000371 000000
00060: 000371 000371 000372 000372 000000 000372 000372 000373
00070: 000373 000000 000373 000373 000374 000374 000000 000374
00100: 000374 000374 000375 000000 000375 000375 000375 000375
00110: 000000 000375 000376 000376 000376 000000 000376 000376
00120: 000376 000376 000000 000377 000377 000377 000377 000000
00130: 000000 000000 000000 000000 000000 000001 000001 000001
00140: 000001 000000 000001 000001 000001 000002 000000 000002
00150: 000002 000002 000002 000000 000002 000003 000003 000003
00160: 000000 000003 000003 000004 000004 000000 000004 000004
00170: 000005 000005 000000 000005 000005 000006 000006 000000

*T RECORD 7 (%7, #7)
00000: 077400 160300 054210 000001 000000 002661 060140 000000
00010: 000006 000006 000007 000007 000000 000007 000010 000010
00020: 000011 000000 000011 000011 000012 000012 000000 000013
```

```
00030: 000013 000014 000014 000000 000015 000015 000016 000016
00040: 000000 000017 000017 000020 000021 000000 000021 000022
00050: 000023 000023 000000 000024 000025 000025 000026 000000
00060: 000027 000030 000031 000031 000000 000032 000033 000034
00070: 000035 000000 000036 000037 000040 000041 000000 000042
00100: 000043 000044 000045 000000 000046 000050 000051 000052
00110: 000000 000053 000054 000056 000057 000000 000060 000062
00120: 000063 000065 000000 000066 000070 000071 000073 000000
00130: 000074 000076 000077 000101 000000 000103 000104 000106
00140: 000110 000000 000112 000114 000115 000117 000000 000121
00150: 000123 000125 000127 000000 000131 000134 000136 000140
00160: 000000 000142 000144 000147 000151 000000 000153 000156
00170: 000160 000163 000000 000165 000170 000172 000175 000000

*T RECORD 8 (%10, #8)
00000: 077400 160300 112300 000001 000000 003021 060140 000000
00010: 000200 000202 000205 000207 000000 000212 000215 000217
00020: 000221 000000 000224 000226 000231 000233 000000 000235
00030: 000237 000242 000244 000000 000246 000250 000252 000254
00040: 000000 000256 000260 000262 000264 000000 000266 000267
00050: 000271 000273 000000 000275 000276 000300 000302 000000
00060: 000303 000305 000306 000310 000000 000311 000313 000314
00070: 000316 000000 000317 000320 000322 000323 000000 000324
00100: 000326 000327 000330 000000 000331 000332 000333 000334
00110: 000000 000335 000336 000340 000341 000000 000341 000342
00120: 000343 000344 000000 000345 000346 000347 000350 000000
00130: 000350 000351 000352 000353 000000 000353 000354 000355
00140: 000355 000000 000356 000357 000357 000360 000000 000361
00150: 000361 000362 000362 000000 000363 000363 000364 000364
00160: 000000 000365 000365 000365 000366 000000 000366 000367
00170: 000367 000367 000000 000370 000370 000370 000371 000000

*T RECORD 9 (%11, #9)
00000: 077400 160300 064422 000001 000000 003161 060140 000000
00010: 000371 000371 000372 000372 000000 000372 000372 000373
00020: 000373 000000 000373 000373 000374 000374 000000 000374
00030: 000374 000374 000375 000000 000375 000375 000375 000375
00040: 000000 000375 000376 000376 000376 000000 000376 000376
00050: 000376 000376 000000 000377 000377 000377 000377 000000
00060: 000000 000000 000000 000000 000000 000001 000001 000001
00070: 000001 000000 000001 000001 000001 000002 000000 000002
00100: 000002 000002 000002 000000 000002 000003 000003 000003
00110: 000000 000003 000003 000004 000004 000000 000004 000004
00120: 000005 000005 000000 000005 000005 000006 000006 000000
00130: 000006 000006 000007 000007 000000 000007 000010 000010
00140: 000011 000000 000011 000011 000012 000012 000000 000013
00150: 000013 000014 000014 000000 000015 000015 000016 000016
00160: 000000 000017 000017 000020 000021 000000 000021 000022
00170: 000023 000023 000000 000024 000025 000025 000026 000000

*T RECORD 10 (%12, #A)
00000: 077400 160300 066163 000001 000000 003321 060140 000000
00010: 000027 000030 000031 000031 000000 000032 000033 000034
00020: 000035 000000 000036 000037 000040 000041 000000 000042
00030: 000043 000044 000045 000000 000046 000050 000051 000052
00040: 000000 000053 000054 000056 000057 000000 000060 000062
00050: 000063 000065 000000 000066 000070 000071 000073 000000
00060: 000074 000076 000077 000101 000000 000103 000104 000106
```

```
00070:  000110 000000 000112 000114 000115 000117 000000 000121
00100:  000123 000125 000127 000000 000131 000134 000136 000140
00110:  000000 000142 000144 000147 000151 000000 000153 000156
00120:  000160 000163 000000 000165 000170 000172 000175 000000
00130:  000200 000202 000205 000207 000000 000212 000215 000217
00140:  000221 000000 000224 000226 000231 000233 000000 000235
00150:  000237 000242 000244 000000 000246 000250 000252 000254
00160:  000000 000256 000260 000262 000264 000000 000266 000267
00170:  000271 000273 000000 000275 000276 000300 000302 000000

*T RECORD 11 (%13, #B)
00000:  077400 160300 120403 000001 000000 003461 060140 000000
00010:  000303 000305 000306 000310 000000 000311 000313 000314
00020:  000316 000000 000317 000320 000322 000323 000000 000324
00030:  000326 000327 000330 000000 000331 000332 000333 000334
00040:  000000 000335 000336 000340 000341 000000 000341 000342
00050:  000343 000344 000000 000345 000346 000347 000350 000000
00060:  000350 000351 000352 000353 000000 000353 000354 000355
00070:  000355 000000 000356 000357 000357 000360 000000 000361
00100:  000361 000362 000362 000000 000363 000363 000364 000364
00110:  000000 000365 000365 000365 000366 000000 000366 000367
00120:  000367 000367 000000 000370 000370 000370 000371 000000
00130:  000371 000371 000372 000372 000000 000372 000372 000373
00140:  000373 000000 000373 000373 000374 000374 000000 000374
00150:  000374 000374 000375 000000 000375 000375 000375 000375
00160:  000000 000375 000376 000376 000376 000000 000376 000376
00170:  000376 000376 000000 000377 000377 000377 000377 000000

*T RECORD 12 (%14, #C)
00000:  077400 160300 047600 000001 000000 003621 060140 000000
00010:  000000 000000 000000 000000 000000 000001 000001 000001
00020:  000001 000000 000001 000001 000001 000002 000000 000002
00030:  000002 000002 000002 000000 000002 000003 000003 000003
00040:  000000 000003 000003 000004 000004 000000 000004 000004
00050:  000005 000005 000000 000005 000005 000006 000006 000000
00060:  000006 000006 000007 000007 000000 000007 000010 000010
00070:  000011 000000 000011 000011 000012 000012 000000 000013
00100:  000013 000014 000014 000000 000015 000015 000016 000016
00110:  000000 000017 000017 000020 000021 000000 000021 000022
00120:  000023 000023 000000 000024 000025 000025 000026 000000
00130:  000027 000030 000031 000031 000000 000032 000033 000034
00140:  000035 000000 000036 000037 000040 000041 000000 000042
00150:  000043 000044 000045 000000 000046 000050 000051 000052
00160:  000000 000053 000054 000056 000057 000000 000060 000062
00170:  000063 000065 000000 000066 000070 000071 000073 000000

*T RECORD 13 (%15, #D)
00000:  077400 160300 101642 000001 000000 003761 060140 000000
00010:  000074 000076 000077 000101 000000 000103 000104 000106
00020:  000110 000000 000112 000114 000115 000117 000000 000121
00030:  000123 000125 000127 000000 000131 000134 000136 000140
00040:  000000 000142 000144 000147 000151 000000 000153 000156
00050:  000160 000163 000000 000165 000170 000172 000175 000000
00060:  000200 000202 000205 000207 000000 000212 000215 000217
00070:  000221 000000 000224 000226 000231 000233 000000 000235
00100:  000237 000242 000244 000000 000246 000250 000252 000254
00110:  000000 000256 000260 000262 000264 000000 000266 000267
00120:  000271 000273 000000 000275 000276 000300 000302 000000
```

```
00130: 000303 000305 000306 000310 000000 000311 000313 000314
00140: 000316 000000 000317 000320 000322 000323 000000 000324
00150: 000326 000327 000330 000000 000331 000332 000333 000334
00160: 000000 000335 000336 000340 000341 000000 000341 000342
00170: 000343 000344 000000 000345 000346 000347 000350 000000

*T RECORD 14 (%16, #E)
00000: 077400 160300 104103 000001 000000 004121 060140 000000
00010: 000350 000351 000352 000353 000000 000353 000354 000355
00020: 000355 000000 000356 000357 000357 000360 000000 000361
00030: 000361 000362 000362 000000 000363 000363 000364 000364
00040: 000000 000365 000365 000365 000366 000000 000366 000367
00050: 000367 000367 000000 000370 000370 000370 000371 000000
00060: 000371 000371 000372 000372 000000 000372 000372 000373
00070: 000373 000000 000373 000373 000374 000374 000000 000374
00100: 000374 000374 000375 000000 000375 000375 000375 000375
00110: 000000 000375 000376 000376 000376 000000 000376 000376
00120: 000376 000376 000000 000377 000377 000377 000377 000000
00130: 000000 000000 000001 000001 000000 000002 000002 000003
00140: 000003 000000 000004 000004 000005 000005 000000 000006
00150: 000007 000007 000010 000000 000010 000011 000012 000012
00160: 000000 000013 000013 000014 000015 000000 000015 000016
00170: 000017 000017 000000 000020 000021 000021 000022 000000

*T RECORD 15 (%17, #F)
00000: 077400 160300 061073 000001 000000 004261 060140 000000
00010: 000023 000023 000024 000025 000000 000026 000026 000027
00020: 000030 000000 000031 000031 000032 000033 000000 000034
00030: 000034 000035 000036 000000 000037 000040 000041 000041
00040: 000000 000042 000043 000044 000045 000000 000046 000047
00050: 000047 000050 000000 000051 000052 000053 000054 000000
00060: 000055 000056 000057 000060 000000 000061 000062 000063
00070: 000064 000000 000065 000066 000067 000070 000000 000071
00100: 000072 000073 000074 000000 000076 000077 000101 000102
00110: 000000 000103 000104 000105 000106 000000 000110 000111
00120: 000112 000113 000000 000114 000116 000117 000120 000000
00130: 000121 000123 000124 000125 000000 000126 000130 000131
00140: 000132 000000 000134 000135 000137 000140 000000 000141
00150: 000143 000144 000146 000000 000147 000150 000152 000153
00160: 000000 000155 000156 000160 000161 000000 000163 000164
00170: 000166 000170 000000 000171 000173 000174 000176 000000

*T RECORD 16 (%20, #10)
00000: 077400 160300 110372 000001 000000 004421 060140 000000
00010: 000200 000201 000203 000204 000000 000206 000210 000211
00020: 000213 000000 000214 000216 000217 000221 000000 000222
00030: 000224 000225 000227 000000 000230 000232 000233 000235
00040: 000000 000236 000237 000241 000242 000000 000243 000245
00050: 000246 000250 000000 000251 000252 000253 000255 000000
00060: 000256 000257 000261 000262 000000 000263 000264 000265
00070: 000267 000000 000270 000271 000272 000273 000000 000275
00100: 000276 000277 000300 000000 000301 000302 000303 000304
00110: 000000 000305 000306 000310 000311 000000 000312 000313
00120: 000314 000315 000000 000316 000317 000320 000321 000000
00130: 000322 000323 000323 000324 000000 000325 000326 000327
00140: 000330 000000 000331 000332 000333 000334 000000 000334
00150: 000335 000336 000337 000000 000340 000341 000342 000342
00160: 000000 000343 000344 000345 000345 000000 000346 000347
```

00170: 000350 000350 000000 000351 000352 000353 000353 000000

*T RECORD 17 (%21, #11)
00000: 077400 160300 067071 000001 000000 004561 060140 000000
00010: 000354 000355 000356 000356 000000 000357 000360 000360
00020: 000361 000000 000362 000362 000363 000364 000000 000364
00030: 000365 000365 000366 000000 000367 000367 000370 000370
00040: 000000 000371 000372 000372 000373 000000 000373 000374
00050: 000374 000375 000000 000375 000376 000377 000377 000000
00060: 000000 000000 000001 000001 000000 000002 000002 000003
00070: 000003 000000 000004 000004 000005 000005 000000 000006
00100: 000007 000007 000010 000000 000010 000011 000012 000012
00110: 000000 000013 000013 000014 000015 000000 000015 000016
00120: 000017 000017 000000 000020 000021 000021 000022 000000
00130: 000023 000023 000024 000025 000000 000026 000026 000027
00140: 000030 000000 000031 000031 000032 000033 000000 000034
00150: 000034 000035 000036 000000 000037 000040 000041 000041
00160: 000000 000042 000043 000044 000045 000000 000046 000047
00170: 000047 000050 000000 000051 000052 000053 000054 000000

*T RECORD 18 (%22, #12)
00000: 077400 160300 071143 000001 000000 004721 060140 000000
00010: 000055 000056 000057 000060 000000 000061 000062 000063
00020: 000064 000000 000065 000066 000067 000070 000000 000071
00030: 000072 000073 000074 000000 000076 000077 000101 000102
00040: 000000 000103 000104 000105 000106 000000 000110 000111
00050: 000112 000113 000000 000114 000116 000117 000120 000000
00060: 000121 000123 000124 000125 000000 000126 000130 000131
00070: 000132 000000 000134 000135 000137 000140 000000 000141
00100: 000143 000144 000146 000000 000147 000150 000152 000153
00110: 000000 000155 000156 000160 000161 000000 000163 000164
00120: 000166 000170 000000 000171 000173 000174 000176 000000
00130: 000200 000201 000203 000204 000000 000206 000210 000211
00140: 000213 000000 000214 000216 000217 000221 000000 000222
00150: 000224 000225 000227 000000 000230 000232 000233 000235
00160: 000000 000236 000237 000241 000242 000000 000243 000245
00170: 000246 000250 000000 000251 000252 000253 000255 000000

*T RECORD 19 (%23, #13)
00000: 077400 160300 116774 000001 000000 005061 060140 000000
00010: 000256 000257 000261 000262 000000 000263 000264 000265
00020: 000267 000000 000270 000271 000272 000273 000000 000275
00030: 000276 000277 000300 000000 000301 000302 000303 000304
00040: 000000 000305 000306 000310 000311 000000 000312 000313
00050: 000314 000315 000000 000316 000317 000320 000321 000000
00060: 000322 000323 000323 000324 000000 000325 000326 000327
00070: 000330 000000 000331 000332 000333 000334 000000 000334
00100: 000335 000336 000337 000000 000340 000341 000342 000342
00110: 000000 000343 000344 000345 000345 000000 000346 000347
00120: 000350 000350 000000 000351 000352 000353 000353 000000
00130: 000354 000355 000356 000356 000000 000357 000360 000360
00140: 000361 000000 000362 000362 000363 000364 000000 000364
00150: 000365 000365 000366 000000 000367 000367 000370 000370
00160: 000000 000371 000372 000372 000373 000000 000373 000374
00170: 000374 000375 000000 000375 000376 000377 000377 000000

*T RECORD 20 (%24, #14)
00000: 077400 160300 054117 000001 000000 005221 060140 000000

```
00010: 000000 000000 000001 000001 000000 000002 000002 000003
00020: 000003 000000 000004 000004 000005 000005 000000 000006
00030: 000007 000007 000010 000000 000010 000011 000012 000012
00040: 000000 000013 000013 000014 000015 000000 000015 000016
00050: 000017 000017 000000 000020 000021 000021 000022 000000
00060: 000023 000023 000024 000025 000000 000026 000026 000027
00070: 000030 000000 000031 000031 000032 000033 000000 000034
00100: 000034 000035 000036 000000 000037 000040 000041 000041
00110: 000000 000042 000043 000044 000045 000000 000046 000047
00120: 000047 000050 000000 000051 000052 000053 000054 000000
00130: 000055 000056 000057 000060 000000 000061 000062 000063
00140: 000064 000000 000065 000066 000067 000070 000000 000071
00150: 000072 000073 000074 000000 000076 000077 000101 000102
00160: 000000 000103 000104 000105 000106 000000 000110 000111
00170: 000112 000113 000000 000114 000116 000117 000120 000000

*T RECORD 21 (%25, #15)
00000: 077400 160300 101717 000001 000000 005361 060140 000000
00010: 000121 000123 000124 000125 000000 000126 000130 000131
00020: 000132 000000 000134 000135 000137 000140 000000 000141
00030: 000143 000144 000146 000000 000147 000150 000152 000153
00040: 000000 000155 000156 000160 000161 000000 000163 000164
00050: 000166 000170 000000 000171 000173 000174 000176 000000
00060: 000200 000201 000203 000204 000000 000206 000210 000211
00070: 000213 000000 000214 000216 000217 000221 000000 000222
00100: 000224 000225 000227 000000 000230 000232 000233 000235
00110: 000000 000236 000237 000241 000242 000000 000243 000245
00120: 000246 000250 000000 000251 000252 000253 000255 000000
00130: 000256 000257 000261 000262 000000 000263 000264 000265
00140: 000267 000000 000270 000271 000272 000273 000000 000275
00150: 000276 000277 000300 000000 000301 000302 000303 000304
00160: 000000 000305 000306 000310 000311 000000 000312 000313
00170: 000314 000315 000000 000316 000317 000320 000321 000000

*T RECORD 22 (%26, #16)
00000: 077400 160300 104042 000001 000000 005521 060140 000000
.00010: 000322 000323 000323 000324 000000 000325 000326 000327
00020: 000330 000000 000331 000332 000333 000334 000000 000334
00030: 000335 000336 000337 000000 000340 000341 000342 000342
00040: 000000 000343 000344 000345 000345 000000 000346 000347
00050: 000350 000350 000000 000351 000352 000353 000353 000000
00060: 000354 000355 000356 000356 000000 000357 000360 000360
00070: 000361 000000 000362 000362 000363 000364 000000 000364
00100: 000365 000365 000366 000000 000367 000367 000370 000370
00110: 000000 000371 000372 000372 000373 000000 000373 000374
00120: 000374 000375 000000 000375 000376 000377 000377 000000
00130: 000000 000000 000001 000001 000000 000002 000002 000003
00140: 000003 000000 000004 000004 000005 000005 000000 000006
00150: 000007 000007 000010 000000 000010 000011 000012 000012
00160: 000000 000013 000013 000014 000015 000000 000015 000016
00170: 000017 000017 000000 000020 000021 000021 000022 000000

*T RECORD 23 (%27, #17)
00000: 077400 160300 062473 000001 000000 005661 060140 000000
00010: 000023 000023 000024 000025 000000 000026 000026 000027
00020: 000030 000000 000031 000031 000032 000033 000000 000034
00030: 000034 000035 000036 000000 000037 000040 000041 000041
00040: 000000 000042 000043 000044 000045 000000 000046 000047
```

43

```
00050: 000047 000050 000000 000051 000052 000053 000054 000000
00060: 000055 000056 000057 000060 000000 000061 000062 000063
00070: 000064 000000 000065 000066 000067 000070 000000 000071
00100: 000072 000073 000074 000000 000076 000077 000101 000102
00110: 000000 000103 000104 000105 000106 000000 000110 000111
00120: 000112 000113 000000 000114 000116 000117 000120 000000
00130: 000121 000123 000124 000125 000000 000126 000130 000131
00140: 000132 000000 000134 000135 000137 000140 000000 000141
00150: 000143 000144 000146 000000 000147 000150 000152 000153
00160: 000000 000155 000156 000160 000161 000000 000163 000164
00170: 000166 000170 000000 000171 000173 000174 000176 000000

*T RECORD 24 (%30, #18)
00000: 077400 160300 111772 000001 000000 006021 060140 000000
00010: 000200 000201 000203 000204 000000 000206 000210 000211
00020: 000213 000000 000214 000216 000217 000221 000000 000222
00030: 000224 000225 000227 000000 000230 000232 000233 000235
00040: 000000 000236 000237 000241 000242 000000 000243 000245
00050: 000246 000250 000000 000251 000252 000253 000255 000000
00060: 000256 000257 000261 000262 000000 000263 000264 000265
00070: 000267 000000 000270 000271 000272 000273 000000 000275
00100: 000276 000277 000300 000000 000301 000302 000303 000304
00110: 000000 000305 000306 000310 000311 000000 000312 000313
00120: 000314 000315 000000 000316 000317 000320 000321 000000
00130: 000322 000323 000323 000324 000000 000325 000326 000327
00140: 000330 000000 000331 000332 000333 000334 000000 000334
00150: 000335 000336 000337 000000 000340 000341 000342 000342
00160: 000000 000343 000344 000345 000345 000000 000346 000347
00170: 000350 000350 000000 000351 000352 000353 000353 000000

*T RECORD 25 (%31, #19)
00000: 062400 160300 173564 000001 000000 006161 045513 000000
00010: 000354 000355 000356 000356 000000 000357 000360 000360
00020: 000361 000000 000362 000362 000363 000364 000000 000364
00030: 000365 000365 000366 000000 000367 000367 000370 000370
00040: 000000 000371 000372 000372 000373 000000 000373 000374
00050: 000374 000375 000000 000375 000376 000377 000377 000000
00060: 002135 004000 000011 000016 000000 000017 000020 000021
00070: 000022 000000 000023 000030 000031 000035 000000 000000
00100: 000140 000000 000000 000000 000000 000000 000001 000005
00110: 000000 000000 000000 000000 000000 000000 000000 000125
00120: 000131 000125 000000 000061 000105 000125 000101 000000
00130: 100411 100211 100611 000200 000000 000017 052120 053116
00140: 020040 000000 020040 020040 001000 000000 000000 000000
00150: SAME: TO 000200-1

*T RECORD 26 (%32, #1A)
00000: 004400 160300 107124 000001 000000 006222 000401 000000
00010: 120000 000000 000000 000000 000000 000000 000000 000000
00020: SAME: TO 000200-1

*T RECORD 27 (%33, #1B)
00000: 034000 160300 160237 000001 000000 006274 023447 000000
00010: 002203 002020 000105 000125 000000 000101 024130 026042
00020: 052523 000000 042440 052110 042440 045505 000000 054502
00030: 047501 051104 021051 000000 024130 026042 052520 042101
00040: 000000 052105 020120 047523 051511 000000 041114 042440
00050: 044516 020120 000000 047523 044524 044526 042440 000000
```

44

```
00060: 055117 047515 020117 047114 000000 054440 020440 021051
00070: 000000 000000 000000 000000 000000 000000 000000 000000
00100: SAME: TO 000200-1
```

*T RECORD 28 (%34, #1C)
```
00000: 076400 160300 133360 000001 000000 007276 043507 000004
00010: 000000 000000 000000 014001 010210 007276 003400 040001
00020: 007276 070001 011555 120430 014002 000000 000000 007311
00030: 011723 050001 011724 000212 003401 002400 070001 006570
00040: 014002 000000 000000 010604 007320 011723 070001 006656
00050: 014003 010400 006656 011642 000000 002401 004101 003400
00060: 070001 011546 014003 011641 010000 006656 000000 002401
00070: 003400 100200 030001 011546 002021 024001 007344 002400
00100: 104010 070001 006656 024001 007416 002404 070001 006630
00110: 004210 002404 050001 006656 024001 007362 060001 006656
00120: 000010 002020 002004 001100 070001 006656 100210 060001
00130: 006630 040000 070001 006630 024001 007346 104210 060001
00140: 006630 070001 006656 060001 011636 064001 011642 040421
00150: 014004 006343 011554 007375 040510 014005 006656 014006
00160: 060001 011554 002210 002002 014007 060001 011636 064001
00170: 011642 040420 014004 006377 011554 000000 000000 000000
```

*T RECORD 29 (%35, #1D)
```
00000: 013000 160300 100470 000001 000000 007405 004411 012200
00010: 007407 014006 060001 011554 002002 044000 014007 060001
00020: 006656 002004 003004 100000 070001 006656 000000 000000
00030: SAME: TO 000200-1
```

*T RECORD 30 (%36, #1E)
```
00000: 046400 160300 002705 000001 000000 006343 034070 000000
00010: 024042 020131 047525 020101 000000 051105 020117 050105
00020: 051101 000000 052111 047107 020124 050126 000000 047040
00030: 053511 052110 020033 000000 023144 041116 047511 051505
00040: 000000 015446 062100 020126 040514 000000 052505 020042
00050: 026111 031051 000000 024042 020124 054520 042440 000000
00060: 047520 035127 041120 032460 000000 026060 020124 047440
00070: 052523 000000 042440 042105 043101 052514 000000 052040
00100: 015446 062102 047117 000000 044523 042433 023144 040040
00110: 000000 053101 046125 042442 024440 000000 000000 000000
00120: SAME: TO 000200-1
```

*T RECORD 31 (%37, #1F)
```
00000: 077000 160300 170465 000001 000000 007416 041102 104210
00010: 060001 011722 070001 000052 060001 011721 070001 006573
00020: 004241 002400 070001 006552 014010 000000 000000 007427
00030: 015021 107276 014011 000000 000000 007451 006637 010421
00040: 011641 000000 011720 007265 010421 011641 006655 011641
00050: 000027 010421 011720 006657 011673 002112 010432 011636
00060: 002114 011636 014012 000000 000000 015021 007453 014013
00070: 000000 000000 007456 107276 120641 014014 000000 000000
00100: 007460 014015 000000 000000 007463 015032 011717 014014
00110: 000000 000000 007465 014016 000000 000000 010641 007470
00120: 006554 014017 000000 000000 007473 015021 006555 014002
00130: 000000 000000 007476 011654 104000 070001 007261 064001
00140: 006555 101020 100400 014241 011657 070001 006566 014020
00150: 000000 000000 007511 010430 006556 011716 011641 060001
00160: 006556 004210 002002 024001 007520 060001 011715 070001
00170: 006252 104000 060001 011677 070001 006254 000000 000000
```

```
*T RECORD 32 (%40, #20)
00000: 076400 160300 165650 000001 000000 007520 041503 120432
00010: 014021 000000 000000 007523 007264 014022 000000 000000
00020: 010432 007527 011634 007262 014023 000000 000000 010421
00030: 007536 011641 007264 007262 010610 107276 007261 060001
00040: 011651 040001 011555 000241 006400 174000 014023 000000
00050: 000000 007551 010421 011636 007264 007262 107276 014212
00060: 007261 060001 011714 070001 007260 014024 000000 000000
00070: 010421 007563 011640 007260 011640 010432 006555 011640
00100: 006554 014025 000000 000000 010421 007570 000012 011640
00110: 011642 104210 060001 006554 070001 000023 060001 006555
00120: 070001 000024 104241 060001 011674 070001 007257 014026
00130: 000000 000000 007605 010421 011637 000000 007257 107276
00140: 014010 006552 060001 006552 002002 024001 011522 120432
00150: 014026 000000 000000 007613 011701 014026 000000 000000
00160: 010430 007617 011640 011637 060001 006655 004240 002003
00170: 024001 007646 014027 000000 000000 000000 000000 000000

*T RECORD 33 (%41, #21)
00000: 077000 160300 012161 000001 000000 007623 042505 010421
00010: 007633 006657 002114 002112 010421 006655 006637 006275
00020: 107276 104241 060001 011673 070001 006237 014015 000000
00030: 000000 007640 014212 011713 060001 011712 070001 006276
00040: 014030 000000 000000 010432 007646 011640 006276 014026
00050: 000000 000000 010641 007651 011701 014026 000000 000000
00060: 007655 010401 011703 002053 104200 002173 040401 014031
00070: 002171 104400 011551 120420 014032 000000 000000 007666
00100: 011551 104400 010210 006571 002404 050001 006556 024001
00110: 007674 100212 024001 007706 002400 070001 006235 014015
00120: 000000 000000 010421 007703 011654 006235 011634 120432
00130: 014015 000000 000000 007706 006262 014033 000000 000000
00140: 010432 007712 006222 006274 014015 000000 000000 010421
00150: 007717 011663 006265 011644 120421 014030 000000 000000
00160: 007723 011711 006252 100212 060001 006656 002003 024001
00170: 007736 014015 000000 000000 010000 007733 000000 000000

*T RECORD 34 (%42, #22)
00000: 077400 160300 052156 000001 000000 007730 044511 010432
00010: 011652 006656 011641 014034 000000 000000 010410 007736
00020: 011641 002404 070001 006551 120421 014015 000000 000000
00030: 007745 011652 006551 014010 011641 060001 006655 002003
00040: 024001 007760 004241 003400 070001 006551 014015 000000
00050: 000000 007757 010430 011652 006551 011641 024001 007770
00060: 120421 014035 000000 000000 007770 011674 011710 010421
00070: 011640 006555 011640 006554 120421 014035 000000 000000
00100: 010000 011640 011653 010421 011640 006555 011640 006554
00110: 000501 104200 006571 014036 011631 004200 003000 070001
00120: 011546 060001 006570 003000 100212 010001 011546 002021
00130: 024001 010037 014037 000000 000000 010641 010016 011641
00140: 014040 000000 000000 010025 010421 011641 011640 011640
00150: 011662 014204 011641 060001 011645 064001 011642 014004
00160: 010424 006314 011554 010034 014006 100110 060001 011554
00170: 002002 014007 060001 011675 100000 070001 006654 000000

*T RECORD 35 (%43, #23)
00000: 076400 160300 016133 000001 000000 010041 041102 120432
00010: 014041 000000 000000 010044 011641 014042 000000 000000
```

```
00020:  010421 010060 006552 006644 006641 010421 006640 006643
00030:  006642 006653 010430 006652 006651 011640 060001 006552
00040:  004210 002020 024001 011522 060001 011707 050001 006644
00050:  104210 024001 010373 060001 011706 050001 006644 024001
00060:  010044 104210 060001 011643 050001 006644 024001 010075
00070:  024001 010105 100101 060001 006641 002004 014043 010105
00100:  010421 010374 010044 011236 010552 004010 002400 070001
00110:  006632 002404 070001 006630 100010 060001 006223 003026
00120:  002001 024001 010136 104200 070001 011553 060001 006630
00130:  040001 011630 160000 104212 050001 006644 024001 010124
00140:  024001 010132 014044 000000 000000 010410 010127 011640
00150:  002404 070001 006632 104010 024001 010136 034001 006630
00160:  000000 034001 011553 100200 024001 010116 002404 050001
00170:  006556 003401 000000 002400 006404 000000 000000 000000
```

*T RECORD 36 (%44, #24)
```
00000:  077400 160300 015431 000001 000000 010143 044110 100000
00010:  054001 006632 007401 006400 010001 004241 002021 024001
00020:  010167 014015 000000 000000 010154 015021 006262 014015
00030:  000000 000000 010157 006263 040430 014003 006643 011705
00040:  024001 010167 104210 024001 010167 060001 011650 040001
00050:  006643 070001 006643 004241 002400 070001 006551 014015
00060:  000000 000000 010176 010420 011652 006551 011641 002404
00070:  104000 070001 006553 060001 006632 002002 003400 100024
00100:  070001 011546 104200 006571 014036 014200 011631 030001
00110:  006570 010001 011546 002020 104000 024001 011262 060001
00120:  006632 002002 003400 100024 070001 011546 104200 006571
00130:  014036 010200 011631 003000 010001 011546 002021 105021
00140:  024001 010240 014035 000000 000000 010240 011640 010421
00150:  011653 011640 006555 011640 015021 006554 014045 000000
00160:  000000 010252 006644 010421 006643 006642 006641 006640
00170:  010432 011641 006637 006633 014046 000000 000000 000000
```

*T RECORD 37 (%45, #25)
```
00000:  076400 160300 132475 000001 000000 010253 043106 010600
00010:  010255 011704 060001 006632 002003 105021 024001 010363
00020:  014026 000000 000000 010263 011701 120421 014026 000000
00030:  000000 010267 011703 002053 000501 104200 002173 014031
00040:  002171 000641 104400 011551 014032 000000 000000 010300
00050:  010020 011551 104400 006571 104200 012020 006571 014036
00060:  011631 003000 104010 070001 011546 060001 006570 003000
00070:  010001 011546 004241 002021 024001 010342 014037 000000
00100:  000000 010320 015021 011641 014040 000000 000000 010327
00110:  011641 010421 011640 011640 011662 011641 104101 060001
00120:  011645 064001 011642 014004 006314 010510 011554 010336
00130:  014006 060001 011554 002212 002002 014007 024001 010345
00140:  014037 000000 000000 010410 010345 011641 002404 050001
00150:  006556 104010 024001 010351 024001 010363 002400 070001
00160:  006235 120421 014015 000000 000000 010360 011654 006235
00170:  015000 011634 014015 000000 000000 000000 000000 000000
```

*T RECORD 38 (%46, #26)
```
00000:  043400 160300 126321 000001 000000 010361 023046 010610
00010:  010363 006262 060001 011645 070001 006551 120421 014015
00020:  000000 000000 010372 011652 006551 014200 011641 024001
00030:  010044 024001 010044 002400 105021 070001 006551 014015
00040:  000000 000000 010403 011652 010641 006551 011641 014037
00050:  000000 000000 010406 015021 011641 014040 000000 000000
```

47

```
00060: 010415 011641 010421 011640 011640 011702 011641 104101
00070: 060001 011645 064001 011642 014004 006433 010510 011554
00100: 010424 014006 060001 011554 002000 002002 014007 000000
00110: SAME: TO 000200-1

*T RECORD 39 (%47, #27)
00000: 017000 160300 025045 000001 000000 006433 011022 000000
00010: 024130 026042 053501 044524 000000 020106 047522 020105
00020: 047104 000000 020117 043040 042111 051520 000000 046101
00030: 054440 027056 027056 000000 027042 024440 000000 000000
00040: SAME: TO 000200-1

*T RECORD 40 (%50, #28)
00000: 076400 160300 040723 000001 000000 010427 044110 004212
00010: 002404 050001 006556 024001 010442 014026 000000 000000
00020: 010641 010435 011701 014026 000000 000000 010441 010600
00030: 011640 011637 024001 010451 002404 105021 070001 006235
00040: 014015 000000 000000 010451 011654 010641 006235 011634
00050: 014035 000000 000000 010461 010421 011640 011653 011640
00060: 006555 010610 011640 006554 060001 011645 070001 006551
00070: 120421 014015 000000 000000 010470 011652 006551 010024
00100: 011641 104200 002173 014031 010032 002171 104400 011551
00110: 014032 000000 000000 010401 010501 011551 104400 006571
00120: 000501 104200 006571 014036 011631 004200 003000 070001
00130: 011546 060001 006570 003000 100212 010001 011546 002021
00140: 024001 010543 014037 000000 000000 010641 010521 011641
00150: 014040 000000 000000 010530 010421 011641 011640 011640
00160: 011662 014204 011641 060001 011645 064001 011642 014004
00170: 010424 006314 011554 010537 014006 000000 000000 000000

*T RECORD 41 (%51, #29)
00000: 036000 160300 036127 000001 000000 010537 017437 100110
00010: 060001 011554 002002 014007 024001 010546 120432 014037
00020: 000000 000000 010546 011641 014047 000000 000000 010612
00030: 010551 011641 024001 010044 014037 000000 000000 010641
00040: 010555 011641 014040 000000 000000 010564 010421 011641
00050: 011640 011640 011700 014204 011641 060001 011645 064001
00060: 011643 014004 010424 011625 011554 010573 014006 100100
00070: 060001 011554 002002 014007 000000 000000 000000 000000
00100: SAME: TO 000200-1

*T RECORD 42 (%52, #2A)
00000: 022000 160300 124211 000001 000000 006455 013427 000000
00010: 024042 020123 050105 041511 000000 040514 020103 052522
00020: 053105 000000 020050 055516 047516 042535 000000 020057
00030: 020061 020057 020062 000000 020057 020116 040515 042451
00040: 000000 020075 020040 021051 000000 000000 000000 000000
00050: SAME: TO 000200-1

*T RECORD 43 (%53, #2B)
00000: 076400 160300 150515 000001 000000 010576 040501 104101
00010: 060001 011636 064001 011643 014004 011623 010510 011554
00020: 010605 014006 060001 011554 002010 002002 014007 002400
00030: 070001 006601 004210 002400 070001 006600 060001 011677
00040: 070001 006626 100000 060001 006626 002020 002004 001100
00050: 105021 070001 006631 014025 000000 000000 010630 107276
00060: 010641 011676 011670 014050 000000 000000 010637 010421
00070: 107277 006616 006626 006631 014210 107276 060001 011675
```

```
00100: 050001 006616 024001 011526 004210 003400 050001 006616
00110: 024001 011170 060001 006626 004010 002002 024001 010703
00120: 002404 070001 006630 104010 060001 011647 070001 011550
00130: 002400 070001 006627 104010 060001 011646 070001 011547
00140: 003400 040001 006630 004210 100050 040001 006627 040001
00150: 011636 040001 011627 100200 064001 006627 174000 034001
00160: 006627 000000 104200 034001 011547 024001 010660 034001
00170: 006630 000000 100000 034001 011550 000000 000000 000000


*T RECORD 44 (%54, #2C)
00000: 077000 160300 052516 000001 000000 010677 044110 100210
00010: 024001 010654 002400 070001 006574 024001 011147 004000
00020: 002404 050001 006626 003401 002400 104000 064001 011672
00030: 154001 007276 007401 006400 000212 010001 002021 024001
00040: 010726 014051 000000 000000 010421 010723 000053 004221
00050: 011665 004200 002404 070001 006574 024001 011147 002404
00060: 100010 050001 006626 003401 002400 064001 011671 100000
00070: 154001 007276 007401 006400 010001 004241 002021 024001
00100: 010751 014051 000000 000000 010746 010420 000053 002221
00110: 011665 002404 104210 070001 006574 024001 011147 060001
00120: 006626 070001 006624 004241 002404 070001 006625 014052
00130: 000000 000000 010773 010421 006616 006604 006626 011670
00140: 010421 107277 107276 006625 006624 010421 006601 006600
00150: 006620 006617 004000 002404 050001 006616 002401 003400
00160: 104000 064001 011667 154001 007277 006401 007400 000210
00170: 030001 002021 024001 011023 060001 011636 000000 000000


*T RECORD 45 (%55, #2D)
00000: 062400 160300 145115 000001 000000 011007 034070 102021
00010: 064001 011643 014004 011621 011554 012200 011015 014006
00020: 060001 011554 002002 044210 014007 060001 011667 170001
00030: 007277 024001 010576 004241 002400 070001 006577 014053
00040: 000000 000000 011037 010421 011636 006577 006604 006602
00050: 010421 006264 006575 006601 006600 100210 060001 006575
00060: 002003 024001 011057 060001 011636 102021 064001 011643
00070: 014004 011617 011554 012200 011051 014006 060001 011554
00100: 002002 044210 014007 060001 011667 170001 007277 024001
00110: 010576 120421 014023 000000 000000 011067 011641 006577
00120: 010421 011635 107276 011666 006575 100210 060001 006575
00130: 002002 024001 011526 060001 011645 100210 040001 011555
00140: 160000 050001 011634 024001 011112 000000 000000 000000
00150: SAME: TO 000200-1


*T RECORD 46 (%56, #2E)
00000: 015000 160300 113351 000001 000000 006504 007417 000000
00010: 024042 020124 054520 042440 000000 044523 020116 047524
00020: 020101 000000 050120 051117 050122 044501 000000 052105
00030: 020042 024440 000000 000000 000000 000000 000000 000000
00040: SAME: TO 000200-1


*T RECORD 47 (%57, #2F)
00000: 021400 160300 104065 000001 000000 011077 010020 104101
00010: 060001 011636 064001 011643 014004 011615 010510 011554
00020: 011106 014006 060001 011554 002210 002002 014007 024001
00030: 010576 060001 011644 100210 040001 011555 160000 050001
00040: 011634 024001 011132 000000 000000 000000 000000 000000
00050: SAME: TO 000200-1
```

```
*T RECORD 48 (%60, #30)
00000: 021400 160300 163143 000001 000000 006523 013026 000000
00010: 024042 020123 050105 041511 000000 040514 020103 052522
00020: 053105 000000 020110 040523 020124 047517 000000 020106
00030: 042527 020123 042520 000000 040522 040524 044517 047123
00040: 000000 020041 021051 000000 000000 000000 000000 000000
00050: SAME: TO 000200-1

*T RECORD 49 (%61, #31)
00000: 077400 160300 143103 000001 000000 011117 043507 104101
00010: 060001 011636 064001 011643 014004 011613 010510 011554
00020: 011126 014006 060001 011554 002212 002002 014007 024001
00030: 010576 014023 000000 000000 010421 011142 011641 006577
00040: 011633 010430 000053 011665 006575 060001 006575 004010
00050: 002002 024001 011526 002404 070001 006574 120421 014015
00060: 000000 000000 011154 011663 000052 015021 011664 014015
00070: 000000 000000 011161 011663 010610 006573 011636 060001
00100: 011636 070001 006551 120421 014015 000000 000000 011170
00110: 011652 006551 015021 011641 014037 000000 000000 011173
00120: 011641 120420 014047 000000 000000 011176 011641 104200
00130: 012020 006571 014036 011631 003000 104010 070001 011546
00140: 060001 006570 003000 010001 011546 004241 002021 024001
00150: 011235 014037 000000 000000 011214 015021 011641 014040
00160: 000000 000000 011223 011641 010421 011640 011640 011662
00170: 011641 104100 060001 011645 064001 011642 014004 000000

*T RECORD 50 (%62, #32)
00000: 077400 160300 073025 000001 000000 011226 041503 010424
00010: 006314 011554 011232 014006 100110 060001 011554 002002
00020: 014007 024001 010044 000501 104200 006571 014036 011631
00030: 004200 003000 070001 011546 060001 006570 003000 100200
00040: 010001 011546 002020 024001 010044 002400 105021 070001
00050: 006551 014015 000000 000000 011260 011652 010410 006551
00060: 011641 002400 070001 006553 104210 060001 002175 040001
00070: 002177 040001 011637 070001 006563 104210 060001 002176
00100: 040001 002200 040001 011637 070001 006561 104210 060001
00110: 002175 070001 006562 060001 002176 070001 006560 104010
00120: 060001 011661 070001 006567 002404 070001 006565 100010
00130: 060001 006554 003026 002001 024001 011412 100210 070001
00140: 011545 003400 040001 006565 070001 011543 120421 014054
00150: 000000 000000 011323 107276 006567 010421 011640 006566
00160: 011543 011641 015020 011660 014054 000000 000000 011325
00170: 002404 104000 070001 006564 060001 006566 003026 000000

*T RECORD 51 (%63, #33)
00000: 076400 160300 110727 000001 000000 011331 042505 004210
00010: 002001 024001 011406 070001 011544 060001 006564 100010
00020: 040001 011555 160000 002003 024001 011402 004204 003400
00030: 040001 006565 070001 011543 014055 010430 011350 006563
00040: 011543 070001 006563 004204 003400 040001 006565 070001
00050: 011543 014056 010430 011360 006562 011543 070001 006562
00060: 004010 003400 040001 006564 100044 070001 011543 040421
00070: 014055 011371 006561 011543 104010 070001 006561 060001
00100: 006564 100044 070001 011543 040421 014056 011401 006560
00110: 011543 104010 070001 006560 034001 006564 000000 034001
00120: 011544 104010 024001 011334 034001 006565 000000 034001
00130: 011545 102021 024001 011307 014003 006562 006563 104241
00140: 024001 011417 024001 011504 014057 000000 000000 011421
```

```
00150: 120432 014060 000000 000000 011424 011641 014061 000000
00160: 000000 010421 011440 006563 011641 006562 010421 011641
00170: 006561 011641 006560 010000 011641 000000 000000 000000


*T RECORD 52 (%64, #34)
00000: 076400 160300 122361 000001 000000 011436 042505 010641
00010: 006557 011641 014062 000000 000000 011444 010641 011656
00020: 011655 014060 000000 000000 011447 010200 011640 002404
00030: 050001 006556 003401 004000 002400 064001 006553 006002
00040: 006401 000010 007400 010001 002021 024001 011471 004241
00050: 002400 070001 006235 014015 000000 000000 011471 010432
00060: 011654 006235 011634 014035 000000 000000 010421 011501
00070: 011640 011653 011640 010432 006555 011640 006554 014037
00100: 000000 000000 010410 011504 011641 002404 050001 006553
00110: 104212 024001 010240 060001 011645 070001 006551 014015
00120: 000000 000000 010421 011516 011652 006551 011641 120430
00130: 014047 000000 000000 011521 011641 024001 010044 120421
00140: 014061 000000 000000 011526 006552 011641 004241 002400
00150: 070001 006551 014015 000000 000000 011535 010432 011652
00160: 006551 011641 014030 000000 000000 010420 011541 011640
00170: 006256 002400 100000 124001 007300 000000 000000 000000


*T RECORD 53 (%65, #35)
00000: 077400 160300 073605 000001 000000 011556 055533 000000
00010: 024042 020116 040515 042440 000000 047117 052040 043117
00020: 052516 000000 042040 021051 024042 020111 000000 046114
00030: 042507 040514 020106 000000 047522 046501 052042 024440
00040: 000000 024042 020125 051505 020113 000000 042531 041117
00050: 040522 042040 000220 021051 000054 000001 015246 000035
00060: 110220 000001 015210 000024 000001 023334 000023 110220
00070: 000001 023360 000056 000001 015132 000022 110420 000001
00100: 023404 000051 006223 040001 000000 121402 040000 000004
00110: 040000 000000 000002 177777 000000 000001 000000 000040
00120: 000042 000006 000003 000000 177400 177774 177000 000064
00130: 000000 000163 000011 000154 001753 000000 000620 000020
00140: 100002 070432 000000 000051 000136 002001 002000 000000
00150: 000200 000056 000024 031040 000000 030440 000400 000377
00160: 177776 000000 020040 000120 000015 177773 000000 000036
00170: 177775 002734 001000 000000 000144 000033 000010 000000


*T RECORD 54 (%66, #36)
00000: 013000 160300 002346 000001 000000 011711 006014 000000
00010: 000066 000125 100416 177757 000000 000124 000032 100004
00020: 000012 000000 000023 000022 000050 000777 000000 000000
00030: SAME: TO 000200-1


*T RECORD 55 (%67, #37)
00000: 002000 160500 150333 167633 000000 000000 000000 000000
00010: SAME: TO 000200-1


*T RECORD 0 (%0, #0)
00000: 032000 160130 014511 000000 000000 000000 001133 000000
00010: 000000 000007 000000 000000 000000 000000 000000 000000
00020: SAME: TO 000030-1
00030: 014003 040467 042103 047040 020101 042101 046440 020104
00040: 044523 050114 040531 020103 047516 052117 052522 020101
00050: 033504 041516 035072 031460 030063 020074 034460 030061
00060: 030065 027061 031061 031076 000000 000000 000000 000000
```

EP 0 455 351 A2

00070: SAME: TO 000200-1

*T RECORD 1 (%1, #1)
00000: 005000 160201 132634 000001 000000 000575 000003 040467
00010: 042103 047040 000000 000000 000000 000000 000000 000000
00020: SAME: TO 000200-1

*T RECORD 2 (%2, #2)
00000: 045000 160417 007133 000007 000002 027106 040504 000015
00010: 000002 027106 042126 000001 000003 027105 047124 051040
00020: 000016 000003 045522 050126 041440 000017 000003 047502
00030: 052524 051440 000014 000002 045515 053127 000010 000002
00040: 054506 044517 000013 000003 054515 047107 051040 000012
00050: 000003 045507 052126 041440 000011 000003 054523 042524
00060: 053040 000006 000003 045523 054523 043040 000005 000003
00070: 047527 042515 050040 000004 000003 045516 051531 051440
00100: 000003 000003 045523 041523 054040 000002 000003 045523
00110: 041523 054440 000000 000000 000000 000000 000000 000000
00120: SAME: TO 000200-1

*T RECORD 3 (%3, #3)
00000: 076400 160300 043611 000001 000000 000566 042505 000000
00010: SAME: TO 000020-1
00020: 000000 040410 014001 000566 003400 040001 000566 100210
00030: 070001 001104 003400 040001 000574 070001 001103 120432
00040: 014002 000000 000000 000611 000564 014003 000000 000000
00050: 010641 000614 000565 014004 000000 000000 000617 015021
00060: 000561 014005 000000 000000 000627 001115 010421 001132
00070: 001115 000565 001115 010210 000564 002404 070001 000563
00100: 060001 001124 100210 070001 001102 002400 070001 000562
00110: 060001 000563 100010 040001 001104 160000 002003 024001
00120: 000644 104210 160001 000573 070001 000562 060001 000563
00130: 040001 001105 100200 064001 000562 174000 034001 000563
00140: 000000 104241 034001 001102 024001 000633 014006 000000
00150: 000000 000660 010401 001126 000557 104200 001112 040401
00160: 014007 000557 104400 001100 120421 014010 000000 000000
00170: 000675 001107 000561 010000 001100 000000 000000 000000

*T RECORD 4 (%4, #4)
00000: 076400 160300 174753 000001 000000 000673 042505 010641
00010: 000157 001130 014011 000000 000000 000702 010420 000157
00020: 001131 001130 104200 012020 001110 014007 000557 104400
00030: 015021 001100 014010 000000 000000 000717 001107 010421
00040: 000561 001100 000157 001130 120421 014012 000000 000000
00050: 000725 000146 001107 010610 000000 001126 060001 001127
00060: 070001 000146 120421 014013 000000 000000 000740 001123
00070: 100571 010421 000046 000155 000153 000154 015021 000075
00100: 014010 000000 000000 000747 001116 010421 100571 001106
00110: 100574 000153 104210 160001 000571 070001 000076 060001
00120: 001123 040001 001103 004210 160000 070001 000077 060001
00130: 001122 040001 001103 004210 160000 070001 000104 060001
00140: 001111 040001 001103 004210 160000 070001 000105 060001
00150: 001121 040001 001103 105021 070001 000773 014014 000000
00160: 000000 000775 000106 010610 100773 001123 060001 001120
00170: 040001 001103 100000 070001 001003 000000 000000 000000

*T RECORD 5 (%5, #5)
00000: 065400 160300 105546 000001 000000 001000 040100 120421

52

```
00010: 014014 000000 000000 001005 000112 101003 014210 001123
00020: 060001 001117 040001 001103 070001 001013 120421 014014
00030: 000000 000000 001015 000151 101013 014210 001107 060001
00040: 001114 040001 001103 070001 001023 120421 014014 000000
00050: 000000 001025 000147 101023 010024 001107 104200 000112
00060: 014015 010020 000151 104400 000112 104200 012020 000114
00070: 014015 000147 104400 010020 000114 104200 100567 104400
00100: 010020 000041 104200 100570 104400 010212 000037 002400
00110: 070001 000074 014016 000000 000000 010421 001061 001115
00120: 001107 000000 015021 001126 014017 000000 000000 001072
00130: 001125 010421 001115 001115 001115 001115 010641 001116
00140: 100572 014016 000000 000000 001076 010410 000146 001107
00150: 002400 124001 000575 000000 000000 000000 000000 000000
00160: SAME: TO 000200-1

*T RECORD 6 (%6, #6)
00000: 021400 160300 164072 000001 000000 001105 013026 010000
00010: 000156 040000 000002 050000 000000 000010 040000 000010
00020: 000047 000000 000000 000001 000045 000041 000000 000025
00030: 000007 000004 177400 000000 177777 000003 000377 000400
00040: 000000 000017 006400 000000 000000 000000 000000 000000
00050: SAME: TO 000200-1

*T RECORD 7 (%7, #7)
00000: 002000 160500 071624 111124 000000 000000 000000 000000
00010: SAME: TO 000200-1

*T RECORD 0 (%0, #0)
00000: 032400 160130 032212 000000 000000 000000 001652 000000
00010: 000000 000007 000000 000000 000000 000000 000000 000000
00020: SAME: TO 000030-1
00030: 014403 040467 052120 042040 020040 040456 055056 020101
00040: 033524 050104 035072 031460 030063 020062 020120 047511
00050: 047124 020126 044516 027040 046501 044516 020074 034460
00060: 030462 030466 027061 031060 032076 000000 000000 000000
00070: SAME: TO 000200-1

*T RECORD 1 (%1, #1)
00000: 005000 160201 135713 000001 000000 000637 000003 040467
00010: 052120 042040 000000 000000 000000 000000 000000 000000
00020: SAME: TO 000200-1

*T RECORD 2 (%2, #2)
00000: 060000 160424 154037 000015 000002 027106 042126 000004
00010: 000003 027105 044517 027040 000005 000003 027104 052101
00020: 027040 000001 000003 027105 047124 051040 000006 000003
00030: 027105 054111 052040 000013 000002 054501 043124 000024
00040: 000003 052516 051524 045440 000023 000002 041501 046114
00050: 000022 000003 051524 040503 045440 000011 000003 045505
00060: 051122 043040 000021 000003 045501 041501 041440 000020
00070: 000002 045501 041462 000014 000002 045515 053127 000017
00100: 000003 045501 031101 041440 000012 000002 054506 044517
00110: 000010 000003 054515 047107 051040 000007 000003 045506
00120: 047101 046440 000016 000003 042124 051116 051440 000003
00130: 000003 041103 050122 046440 000002 000002 046101 041123
00140: 000000 000000 000000 000000 000000 000000 000000 000000
00150: SAME: TO 000200-1
```

EP 0 455 351 A2

```
*T RECORD 3 (%3, #3)
00000: 004400 160300 060702 000001 000000 000000 000401 000000
00010: 100000 000000 000000 000000 000000 000000 000000 000000
00020: SAME: TO 000200-1

*T RECORD 4 (%4, #4)
00000: 004400 160300 060723 000001 000000 000021 000401 000000
00010: 100000 000000 000000 000000 000000 000000 000000 000000
00020: SAME: TO 000200-1

*T RECORD 5 (%5, #5)
00000: 034400 160300 116075 000001 000000 000635 016034 000004
00010: 000000 000000 000000 014001 010210 000635 003400 040001
00020: 000635 070001 001601 120420 014002 000000 000000 000650
00030: 001650 002004 105021 070001 001600 014002 000000 000000
00040: 000655 001600 104212 050001 001621 024001 000660 024001
00050: 001574 014003 000000 000000 010421 000666 000622 001617
00060: 001616 014210 100635 060001 000622 050001 000021 024001
00070: 000704 000000 000000 000000 000000 000000 000000 000000
00100: SAME: TO 000200-1

*T RECORD 6 (%6, #6)
00000: 014400 160300 032055 000001 000000 000022 007016 000000
00010: 024042 020116 047440 044515 000000 040507 042522 020103
00020: 047516 000000 043111 043525 051105 042040 000000 020442
00030: 024440 000000 000000 000000 000000 000000 000000 000000
00040: SAME: TO 000200-1

*T RECORD 7 (%7, #7)
00000: 076400 160300 030323 000001 000000 000671 041503 104101
00010: 060001 001613 064001 001614 014004 001604 010510 001577
00020: 000700 014005 060001 001577 002210 002002 014006 024001
00030: 001574 060001 001613 104210 070001 000601 060001 001647
00040: 150001 000636 024001 000712 100212 024001 000714 002400
00050: 070001 000601 014007 000000 000000 010421 000724 000566
00060: 100636 000546 010430 000601 000575 000574 060001 000566
00070: 004010 002020 024001 001574 002002 024001 000704 004241
00100: 002400 070001 000560 014010 000000 000000 000745 010421
00110: 001613 000560 000546 000620 010421 000617 000573 000575
00120: 000574 100212 060001 000573 002003 024001 000754 014011
00130: 000000 000000 010612 000753 001645 024001 000704 014012
00140: 000000 000000 010421 000763 001616 000560 001612 010610
00150: 100635 001644 060001 001617 040001 001601 004212 160000
00160: 050001 001613 024001 000777 014011 000000 000000 010640
00170: 000773 001646 014013 000000 000000 000000 000000 000000

*T RECORD 8 (%10, #8)
00000: 077000 160300 114357 000001 000000 000774 041102 010610
00010: 000776 001617 024001 000704 060001 001632 104241 040001
00020: 001601 070001 001005 014014 000000 000000 001007 010430
00030: 000005 101005 001645 060001 001631 104241 040001 001601
00040: 070001 001015 014014 000000 000000 001017 010430 000011
00050: 101015 001645 060001 001630 104241 040001 001601 070001
00060: 001025 014014 000000 000000 001027 010420 000015 101025
00070: 001645 104200 012020 000011 014015 000015 104400 010024
00100: 000011 104200 000013 014015 010030 000017 104400 000013
00110: 060001 001627 104241 040001 001601 070001 001051 014016
00120: 000000 000000 001052 010610 000615 101051 060001 001626
```

54

```
00130: 040001 001601 105021 070001 001060 014016 000000 000000
00140: 001061 000613 014210 101060 060001 001625 040001 001601
00150: 070001 001067 120421 014016 000000 000000 001070 000611
00160: 101067 104010 060001 001620 040001 001601 160000 070001
00170: 000607 104000 060001 001624 040001 001601 000000 000000

*T RECORD 9 (%11, #9)
00000: 055400 160300 166251 000001 000000 001076 027457 105021
00010: 070001 001102 014014 000000 000000 001104 000603 010610
00020: 101102 001645 060001 001623 040001 001601 004210 160000
00030: 070001 000610 060001 001622 040001 001601 004200 160000
00040: 070001 000545 060001 000000 002021 104010 024001 001522
00050: 060001 000607 002002 024001 001125 104210 060001 001607
00060: 070001 000602 024001 001134 060001 001606 105021 070001
00070: 000602 014014 000000 000000 001134 000001 010641 000603
00100: 001645 014012 000000 000000 001143 010421 001616 000560
00110: 001612 100635 014204 001644 060001 001613 064001 001621
00120: 014004 010424 100502 001577 001152 014005 100100 060001
00130: 001577 002002 014006 000000 000000 000000 000000 000000
00140: SAME: TO 000200-1

*T RECORD 10 (%12, #A)
00000: 026000 160300 150112 000001 000000 000040 016435 000000
00010: 024042 020115 040523 045440 000000 047101 046505 020050
00020: 067141 000000 066545 027533 026535 027536 000000 024440
00030: 036440 021051 024042 000000 020115 040523 045440 047101
00040: 000000 046505 020050 067141 066545 000000 027533 026535
00050: 024440 076440 000000 021051 000000 000000 000000 000000
00060: SAME: TO 000200-1

*T RECORD 11 (%13, #B)
00000: 077000 160300 071170 000001 000000 001155 040100 004241
00010: 002400 070001 000601 014007 000000 000000 001167 010421
00020: 000566 100636 000532 000601 010610 000575 000574 060001
00030: 001640 050001 000566 100210 024001 001571 003400 050001
00040: 000566 024001 000704 004010 002400 070001 000544 002400
00050: 070001 000600 004000 002404 050001 000566 003401 002400
00060: 104010 070001 001576 060001 000600 003000 010001 001576
00070: 004210 002021 024001 001272 060001 001641 150001 000636
00100: 104210 024001 001217 024001 001242 060001 001620 040001
00110: 001601 105021 070001 001225 014014 000000 000000 001227
00120: 000532 010600 101225 001636 060001 000532 002002 105030
00130: 024001 001236 014011 000000 000000 001234 024001 001114
00140: 104210 024001 001241 060001 001651 070001 000600 024001
00150: 001201 104200 024001 001271 060001 001637 150001 000636
00160: 002401 004200 003400 064001 001643 154001 000636 006401
00170: 000010 007400 010001 002021 024001 001261 000000 000000

*T RECORD 12 (%14, #C)
00000: 077400 160300 074554 000001 000000 001255 042104 120610
00010: 014011 000000 000000 001257 024001 001114 024001 001271
00020: 000401 104200 001610 104400 000130 000401 104200 001610
00030: 104400 000126 104200 024001 001521 060001 001637 150001
00040: 000636 002401 004200 003400 070001 001576 060001 000600
00050: 003000 100212 010001 001576 002021 024001 001307 014011
00060: 000000 000000 014241 001306 024001 001114 014010 000000
00070: 000000 001321 010421 001613 000544 000532 000576 010421
00100: 000572 000573 000575 000574 100212 060001 000573 002003
```

```
00110: 024001 001330 014011 000000 000000 010612 001327 001642
00120: 024001 001114 014012 000000 000000 010421 001337 001616
00130: 000544 001612 010610 100635 000572 060001 001617 040001
00140: 001601 004212 160000 050001 001616 024001 001354 014011
00150: 000000 000000 010641 001347 001622 014013 000000 000000
00160: 001353 010610 001617 000544 024001 001114 060001 001615
00170: 100200 040001 001601 160000 070001 000570 104200 000000

*T RECORD 13 (%15, #D)
00000: 026000 160300 003677 000001 000000 001361 013026 010020
00010: 001612 104400 000564 104200 010030 001612 104400 000562
00020: 060001 001641 104212 150001 000636 024001 001374 024001
00030: 001407 014017 000000 000000 010421 001401 100635 000544
00040: 000546 120421 014014 000000 000000 001406 000132 100635
00050: 014000 001635 024001 001505 000000 000000 000000 000000
00060: SAME: TO 000200-1

*T RECORD 14 (%16, #E)
00000: 022400 160300 020254 000001 000000 000075 014030 000000
00010: 024042 020117 043106 051505 000000 052040 051105 046101
00020: 052111 000000 053105 020124 047440 050111 000000 041524
00030: 052522 042440 047522 000000 044507 044516 020050 044054
00040: 000000 053451 020075 020042 024440 000000 000000 000000
00050: SAME: TO 000200-1

*T RECORD 15 (%17, #F)
00000: 077400 160300 142064 000001 000000 001407 042505 104101
00010: 060001 001613 064001 001614 014004 001602 010510 001577
00020: 001416 014005 060001 001577 002241 002002 014006 014020
00030: 000000 000000 001431 010421 000566 100636 000001 000564
00040: 010610 000003 000562 060001 001640 050001 000566 100210
00050: 024001 001571 003400 050001 000566 024001 001114 104000
00060: 060001 001613 050001 000566 003401 002400 104000 064001
00070: 001637 154001 000636 006401 007400 000212 030001 002021
00100: 024001 001455 014011 000000 000000 014010 001454 024001
00110: 001407 002404 070001 000571 004241 002404 070001 000567
00120: 014021 000000 000000 001471 010421 000566 000132 000571
00130: 000570 010610 000567 100636 060001 001640 050001 000566
00140: 100210 024001 001571 003400 050001 000566 024001 001407
00150: 104212 060001 001637 150001 000636 024001 001505 014011
00160: 000000 000000 014001 001504 024001 001455 104200 000001
00170: 040401 014015 000564 104400 000130 000000 104200 000000

*T RECORD 16 (%20, #10)
00000: 052000 160300 106726 000001 000000 001514 031062 012020
00010: 000003 014015 000562 104400 014001 000126 024001 001532
00020: 104200 001610 000401 104400 000130 104200 001610 000610
00030: 104400 000126 060001 001651 070001 000561 120421 014022
00040: 000000 000000 001556 000560 001616 010421 000546 001636
00050: 000545 001616 010421 000544 001616 000532 001636 010421
00060: 000132 001635 000130 001613 010641 000126 001613 014023
00070: 000000 000000 001562 010641 001634 001633 014024 000000
00100: 000000 001566 010600 000125 001616 060001 000125 002020
00110: 105021 024001 001571 014013 000000 000000 001574 001617
00120: 004000 002400 124001 000637 000000 000000 000000 000000
00130: SAME: TO 000200-1

*T RECORD 17 (%21, #11)
```

```
00000: 035400 160300 174001 000001 000000 001602 024050 004411
00010: 000057 000001 000172 000033 000001 000044 010400 000040
00020: 000057 000000 000000 000000 040000 000002 000042 000011
00030: 000000 000001 000003 000065 000040 000000 000007 000010
00040: 000101 000037 000000 000035 000033 000045 000041 000000
00050: 000025 001753 002173 000400 000000 000012 000056 177776
00060: 000136 000000 000006 000055 000200 000004 000000 000005
00070: 000054 001752 100000 000000 000000 000000 000000 000000
00100: SAME: TO 000200-1

*T RECORD 18 (%22, #12)
00000: 002000 160500 021302 040602 000000 000000 000000 000000
00010: SAME: TO 000200-1

*T RECORD 0 (%0, #0)
00000: 030400 160130 052515 000000 000000 000000 000165 000000
00010: 000000 000007 000000 000000 000000 000000 000000 000000
00020: SAME: TO 000030-1
00030: 012403 040467 052120 046440 052120 053116 046040 066545
00040: 067165 020101 042101 046440 040467 052120 046472 035063
00050: 030060 031440 036071 030060 031061 034456 030460 030471
00060: 037040 000000 000000 000000 000000 000000 000000 000000
00070: SAME: TO 000200-1

*T RECORD 1 (%1, #1)
00000: 005000 160201 141506 000001 000000 000032 000003 040467
00010: 052120 046440 000000 000000 000000 000000 000000 000000
00020: SAME: TO 000200-1

*T RECORD 2 (%2, #2)
00000: 025400 160410 003400 000004 000003 027105 044517 027040
00010: 000005 000003 027111 044517 027040 000007 000003 027104
00020: 052101 027040 000001 000003 027105 047124 051040 000010
00030: 000003 027105 054111 052040 000006 000003 027111 042114
00040: 050040 000003 000003 047527 040522 042440 000002 000003
00050: 045523 041523 054440 000000 000000 000000 000000 000000
Q0060: SAME: TO 000200-1

*T RECORD 3 (%3, #3)
00000: 015400 160300 117214 000001 000000 000000 010020 000000
00010: 000005 000004 177777 000001 000000 000001 177777 051503
00020: 052522 000000 052520 042124 020040 020040 000000 051105
00030: 041514 050122 042526 000000 000000 000000 000000 000000
00040: SAME: TO 000200-1

*T RECORD 4 (%4, #4)
00000: 055000 160300 055720 000001 000000 000031 027457 000101
00010: 000000 000000 014001 000031 104000 160001 000031 040001
00020: 000155 160000 002003 105021 024001 000146 014002 000000
00030: 000000 000045 000030 104000 160001 000031 040001 000155
00040: 160000 100200 010210 000164 003004 040001 000030 070001
00050: 000030 104210 060001 000163 070001 000027 160001 000031
00060: 040001 000155 105021 070001 000070 014003 000000 000000
00070: 000071 000162 010421 000030 000156 000027 100070 104010
00100: 160001 000031 040001 000155 160000 040001 000160 004200
00110: 040000 164001 000031 044001 000153 140001 104204 070001
00120: 000025 060001 000162 064001 000157 014004 010420 000020
00130: 000152 000143 000000 000000 000000 000000 000000 000000
```

```
00140: SAME: TO 000200-1

*T RECORD 5 (%5, #5)
00000: 015400 160300 053164 000001 000000 000122 005413 104204
00010: 060001 000026 040001 000154 070001 000126 014005 004010
00020: 100000 060001 000026 002004 040001 000154 102000 070001
00030: 000134 014005 100000 000000 000000 000000 000000 000000
00040: SAME: TO 000200-1

*T RECORD 6 (%6, #6)
00000: 016000 160300 077246 000001 000000 000110 005012 104210
00010: 160001 000031 040001 000153 070001 000151 160001 000151
00020: 104101 070001 000026 064001 000025 014006 000161 104000
00030: 024001 000142 070001 000150 000000 000000 000000 000000
00040: SAME: TO 000200-1

*T RECORD 7 (%7, #7)
00000: 014400 160300 036407 000001 000000 000135 004411 104210
00010: 060001 000161 040001 000026 070001 000026 034001 000150
00020: 102200 024001 000122 014007 060001 000152 002002 040000
00030: 014010 000000 000000 000000 000000 000000 000000 000000
00040: SAME: TO 000200-1

*T RECORD 8 (%10, #8)
00000: 007000 160300 147636 000001 000000 000020 002405 000000
00010: 024042 025442 026062 040462 000000 024440 000000 000000
00020: SAME: TO 000200-1

*T RECORD 9 (%11, #9)
00000: 005400 160300 114104 000001 000000 000146 001002 004000
00010: 002400 124001 000032 000000 000000 000000 000000 000000
00020: SAME: TO 000200-1

*T RECORD 10 (%12, #A)
00000: 012000 160300 176200 000001 000000 000153 005012 010420
00010: 000002 000005 177777 000000 000000 000040 177777 000002
00020: 000003 000000 000004 000014 000000 000000 000000 000000
00030: SAME: TO 000200-1

*T RECORD 11 (%13, #B)
00000: 002000 160500 070662 110162 000000 000000 000000 000000
00010: SAME: TO 000200-1

*T RECORD 0 (%0, #0)
00000: 032400 160130 155510 000000 000000 000000 000150 000000
00010: 000000 000007 000000 000000 000000 000000 000000 000000
00020: SAME: TO 000030-1
00030: 014403 042532 043514 047040 063545 072040 066151 067145
00040: 020146 071157 066440 061562 072040 020145 027147 067456
00050: 020105 055107 046116 035072 033060 030464 020074 034460
00060: 030061 030460 027061 033460 031076 000000 000000 000000
00070: SAME: TO 000200-1

*T RECORD 1 (%1, #1)
00000: 005000 160201 135524 000001 000000 000011 000003 042532
00010: 043514 047040 000000 000000 000000 000000 000000 000000
00020: SAME: TO 000200-1
```

```
*T RECORD 2 (%2, #2)
00000: 016400 160406 126614 000001 000003 027105 047124 051040
00010: 000004 000002 027103 050115 000003 000003 027101 051124
00020: 047040 000006 000002 040516 042040 000005 000002 051101
00030: 046040 000002 000002 044516 041510 000000 000000 000000
00040: SAME: TO 000200-1

*T RECORD 3 (%3, #3)
00000: 076400 160300 143531 000001 000000 000004 040100 000000
00010: 000000 000000 000000 000000 000101 000000 000000 014001
00020: 000004 004210 003400 040001 000010 070001 000137 060001
00030: 000147 100200 070001 000003 002400 070001 000000 002400
00040: 105021 070001 000001 014002 000000 000000 000031 100005
00050: 014210 000140 070001 000002 060001 000146 140001 000005
00060: 040421 014003 000040 000132 000127 104204 060001 000145
00070: 050001 000002 024001 000116 014004 010610 100006 000000
00100: 024001 000050 024001 000116 100210 060001 000000 002004
00110: 070001 000000 060001 000003 004200 002021 024001 000076
00120: 060001 000001 002004 104210 070001 000001 060001 000001
00130: 040001 000137 070001 000136 120421 014005 000000 000000
00140: 000070 000002 000144 104200 040001 000143 170001 000136
00150: 060001 000003 003000 104210 070001 000003 024001 000115
00160: 060001 000001 040001 000137 104210 064001 000001 044001
00170: 000137 070001 000136 074001 000106 000000 000000 000000

*T RECORD 4 (%4, #4)
00000: 036000 160300 140224 000001 000000 000104 015032 120421
00010: 014006 000000 000000 000110 100106 000142 104200 040001
00020: 000002 170001 000136 060001 000003 003000 104210 070001
00030: 000003 024001 000025 060001 000002 170001 000004 004210
00040: 002404 170001 000005 060001 000001 170001 000007 104200
00050: 060001 000000 170001 000006 024001 000134 003400 104210
00060: 170001 000005 024001 000134 060001 000141 170001 000005
00070: 004000 002400 124001 000011 000000 000000 000000 000000
00100: SAME: TO 000200-1

*T RECORD 5 (%5, #5)
00000: 010400 160300 064201 000001 000000 000140 004010 000000
00010: 000001 177776 177400 000040 000000 000010 000056 000003
00020: 100000 000000 000000 000000 000000 000000 000000 000000
00030: SAME: TO 000200-1

*T RECORD 6 (%6, #6)
00000: 002000 160500 012726 032226 000000 000000 000000 000000
00010: SAME: TO 000200-1

*T RECORD 0 (%0, #0)
00000: 025000 020000 026530 077125 050104 052040 001324 000000
00010: SAME: TO 000020-1
00020: 000000 020111 046501 043505 051055 040511 051102 051125
00030: 051510 026525 050104 040524 042456 020040 047523 047101
00040: 052040 020074 034066 030462 030061 027061 031064 033476
00050: 020040 020040 000000 000000 000000 000000 000000 000000
00060: SAME: TO 000200-1

*T RECORD 1 (%1, #1)
00000: 003400 040001 061232 077125 050104 052000 000000 000000
00010: SAME: TO 000200-1
```

```
*T RECORD 2 (%2, #2)
00000: 036000 060156 001760 000000 000000 001323 003400 074000
00010: 000000 070000 000000 072000 000000 000000 070000 000016
00020: 000000 146016 000400 074024 000000 074024 000000 000400
00030: 074026 000000 074026 000400 000000 074030 000002 074032
00040: 030400 074052 000000 000002 100000 100000 000000 100014
00050: 000000 000000 000536 000000 000014 000000 000000 000000
00060: 100000 000000 000536 000000 000000 000014 000377 000377
00070: 100001 000000 000000 000000 000000 000000 000000 000000
00100: SAME: TO 000200-1

*T RECORD 3 (%3, #3)
00000: 036000 060156 106346 000056 000000 000062 000001 074102
00010: 020127 040511 000000 052111 047107 020106 047522 020120
00020: 000000 051105 053111 047525 051440 040522 000000 051101
00030: 054440 052117 020102 042440 000000 051505 047124 020040
00040: 020040 020040 000000 020040 020040 020040 056530 034001
00050: 000000 002100 031760 074025 000440 017340 000000 033760
00060: 000000 000500 017000 041260 000000 000000 000440 017070
00070: 031760 074027 000000 000440 000000 000000 000000 000000
00100: SAME: TO 000200-1

*T RECORD 4 (%4, #4)
00000: 036000 060156 056743 000134 000000 017340 031760 000000
00010: 000500 017300 000000 031160 000000 000441 007070 031760
00020: 000000 074005 000440 017340 031760 074027 000000 000440
00030: 017360 031460 000000 000040 000000 007000 031760 074055
00040: 000440 017300 000000 101760 000000 000440 017070 031760
00050: 000000 164426 000440 017340 031760 000000 000000 000500
00060: 017000 031460 002120 020040 000000 005000 022664 034001
00070: 002116 031760 000000 074026 000000 000000 000000 000000
00100: SAME: TO 000200-1

*T RECORD 5 (%5, #5)
00000: 036000 060156 156134 000212 000000 000440 017340 101760
00010: 000000 000500 000000 017070 031460 000000 000440 017030
00020: 000000 031461 000000 000500 015030 031460 000000 000000
00030: 000100 015000 043260 002100 000000 000441 006000 033760
00040: 074006 000440 000000 017000 031460 002222 000040 006000
00050: 000000 033760 074033 000440 017340 031760 000000 000000
00060: 000500 017000 031460 002134 000000 014040 005000 031460
00070: 002133 120040 000000 005000 000000 000000 000000 000000
00100: SAME: TO 000200-1

*T RECORD 6 (%6, #6)
00000: 036000 060156 077764 000270 000000 033760 074052 000440
00010: 017000 031460 000000 002222 000040 006000 037324 034001
00020: 000000 002134 031460 002106 000040 006000 000000 101760
00030: 074006 000440 017340 033760 000000 000000 000500 017000
00040: 041560 077777 000000 000440 017070 031460 000000 000040
00050: 000000 011000 033760 000000 000401 011000 000000 033760
00060: 000000 000400 017000 031760 000000 074055 000440 017300
00070: 041260 000000 000000 000440 000000 000000 000000 000000
00100: SAME: TO 000200-1

*T RECORD 7 (%7, #7)
00000: 036000 060156 102207 000346 000000 017070 031460 000000
```

```
00010: 000040 007000 000000 031760 074025 000440 017340 101760
00020: 000000 000000 000500 017070 101477 000000 000000 000440
00030: 017340 033760 000000 000501 000000 017240 057342 034001
00040: 002152 033760 000000 074030 000440 017300 031460 000000
00050: 000000 000040 017160 031461 002222 000440 000000 006170
00060: 031760 074033 000440 017340 000000 031760 000000 000500
00070: 017000 031460 000000 002163 000000 000000 000000 000000
00100: SAME: TO 000200-1
```

*T RECORD 8 (%10, #8)
```
00000: 036000 060156 113572 000424 000000 120040 005000 033760
00010: 074052 000440 000000 017000 031460 002222 000040 006000
00020: 000000 031460 002106 000040 006000 031460 000000 000000
00030: 000040 007000 033760 074030 000000 000440 017300 031760
00040: 177777 000440 000000 017170 031460 002222 000040 006160
00050: 000000 031460 002155 000040 006000 127753 000000 034001
00060: 002170 043260 002100 000441 000000 006000 031760 074003
00070: 000440 017340 000000 033760 000000 000000 000000 000000
00100: SAME: TO 000200-1
```

*T RECORD 9 (%11, #9)
```
00000: 036000 060156 112620 000502 000000 000000 000500 017000
00010: 001560 074001 000000 000440 017340 031760 122602 000440
00020: 000000 017360 031760 074003 000440 017340 000000 103760
00030: 000000 000441 017000 063561 000000 000000 000500 017070
00040: 001560 074001 000000 000440 017340 021760 000000 000500
00050: 000000 017030 031760 074005 000440 017360 000000 031760
00060: 074004 000440 017300 041260 000000 000000 000440 017070
00070: 031760 074026 000000 000440 000000 000000 000000 000000
00100: SAME: TO 000200-1
```

*T RECORD 10 (%12, #A)
```
00000: 036000 060156 026617 000560 000000 017360 131474 034001
00010: 002206 031460 000000 000132 000040 016000 031760 074003
00020: 000000 000440 017340 033760 000000 000500 000000 017000
00030: 001560 074001 000440 017340 000000 031760 122602 000440
00040: 017360 021760 000000 000000 000500 017030 031760 074005
00050: 000000 000440 017360 041260 000000 000440 000000 017030
00060: 031760 074004 000440 017360 000000 031760 074025 000440
00070: 017360 031760 000000 074000 000000 000000 000000 000000
00100: SAME: TO 000200-1
```

*T RECORD 11 (%13, #B)
```
00000: 036000 060156 056043 000636 000000 000440 017360 031460
00010: 000000 000040 000000 007000 031460 000223 000040 006000
00020: 000000 033460 000000 000442 017340 134771 000000 034001
00030: 002224 103760 000000 000501 000000 017000 031760 074004
00040: 000440 017340 000000 023760 000000 000504 017000 003161
00050: 000000 000000 000444 017000 113564 002000 000000 000443
00060: 017000 031460 002235 040040 000000 005000 023760 000000
00070: 000501 017000 000000 123561 000000 000000 000000 000000
00100: SAME: TO 000200-1
```

*T RECORD 12 (%14, #C)
```
00000: 036000 060156 002444 000714 000000 002000 000441 017000
00010: 033760 002000 000000 000444 017000 031464 000000 000440
00020: 000000 017070 031463 000000 000440 017030 000000 013461
00030: 000000 000504 015000 031760 000000 074005 000440 017340
```

```
00040: 033760 000000 000000 000503 017000 104161 034001 002242
00050: 000000 001564 000000 000500 011070 033760 000000 000000
00060: 005404 017000 013461 000000 000000 000441 017000 103462
00070: 002247 020042 000000 005340 000000 000000 000000 000000
00100: SAME: TO 000200-1


*T RECORD 13 (%15, #D)
00000: 036000 060156 100253 000772 000000 103463 002244 000043
00010: 016360 031460 000000 002256 050040 005000 031464 000000
00020: 000000 000440 017030 031460 002260 114040 000000 006000
00030: 033760 074033 000040 017000 000000 033460 002256 040443
00040: 005360 103464 000000 000000 001441 017000 013462 002244
00050: 000000 000442 016000 031460 000243 000040 000000 006000
00060: 031460 000000 000040 007000 000000 105657 034001 002260
00070: 031460 000223 000000 000040 000000 000000 000000 000000
00100: SAME: TO 000200-1


*T RECORD 14 (%16, #E)
00000: 036000 060156 017205 001050 000000 006000 031760 074000
00010: 000440 017340 000000 031760 000000 000500 017000 031460
00020: 000000 002302 020040 005000 031760 000002 000000 000440
00030: 017070 033760 074056 000440 000000 017000 031460 002745
00040: 000040 006000 000000 033760 074065 000440 017000 031460
00050: 000000 002745 000040 006000 033760 074074 000000 000440
00060: 017000 031460 025732 000040 000000 006000 031460 002620
00070: 000040 006000 000000 031460 000000 000000 000000 000000
00100: SAME: TO 000200-1


*T RECORD 15 (%17, #F)
00000: 036000 060156 060243 001126 000000 025763 000040 006000
00010: 031760 135023 000000 000440 017300 035170 034001 002276·
00020: 000000 041260 000000 000440 017070 031460 000000 000243
00030: 000040 006000 031460 000000 000000 000040 007000 031460
00040: 000223 000040 000000 006000 031760 074055 000440 017340
00050: 000000 031760 000000 000500 017000 031460 000000 002106
00060: 120040 006000 033760 100000 000000 000441 017000 031460
00070: 002100 000040 000000 006000 000000 000000 000000 000000
00100: SAME: TO 000200-1


*T RECORD 16 (%20, #10)
00000: 036000 060156 104042 001204 000000 033760 074056 000440
00010: 017000 031460 000000 002745 000040 006000 031760 074003
00020: 000000 000440 017340 033760 000000 000500 000000 017000
00030: 001560 074001 000440 017340 000000 014167 034001 002314
00040: 031760 122602 000000 000440 017360 033760 130202 000440
00050: 000000 017000 103760 000000 000441 017000 000000 031760
00060: 074000 000440 017300 031461 000000 000000 000440 017070
00070: 031460 001427 000000 000040 000000 000000 000000 000000
00100: SAME: TO 000200-1


*T RECORD 17 (%21, #11)
00000: 026400 060142 031627 001262 000000 006000 031760 074003
00010: 000440 017340 000000 063561 000000 000500 017070 001560
00020: 000000 074001 000440 017340 021760 000000 000000 000500
00030: 017030 031760 074005 000440 000000 017360 031760 074004
00040: 000440 017300 000000 041260 000243 000440 006070 031460
00050: 000000 000000 000040 007000 064432 000000 000000 000000
00060: SAME: TO 000200-1
```

```
*T RECORD 18 (%22, #12)
00000: 002000 120000 120000 000000 000000 000000 000000 000000
00010: SAME: TO 000200-1

*T RECORD 19 (%23, #13)
00000: 025000 020000 013522 077103 044123 040440 000240 000000
00010: SAME: TO 000020-1
00020: 000000 020040 061550 060562 060543 072145 071040 071545
00030: 072040 040440 036070 033060 031060 031056 030467 031070
00040: 037040 020040 020040 020040 020040 020040 020040 020040
00050: 020040 020040 000000 000000 000000 000000 000000 000000
00060: SAME: TO 000200-1

*T RECORD 20 (%24, #14)
00000: 003400 040001 043627 077103 044123 040400 000000 000000
00010: SAME: TO 000200-1

*T RECORD 21 (%25, #15)
00000: 036000 060156 035614 000000 000000 000237 034000 074133
00010: 000000 000000 000000 000000 000000 000000 000000 077577
00020: 000000 077577 077577 000000 000000 000000 000000 000000
00030: 000000 000000 077577 077577 000000 077577 007417 007417
00040: 007417 000000 000000 000000 000000 000000 000000 000000
00050: 000000 074170 074170 074170 074170 074170 000000 074170
00060: 000000 000000 000000 000000 000000 000000 000000 007417
00070: 007417 007417 000000 000000 000000 000000 000000 000000
00100: SAME: TO 000200-1

*T RECORD 22 (%26, #16)
00000: 036000 060156 140432 000056 000000 000000 000000 040100
00010: 040100 040100 000000 000401 000401 000401 000000 000000
00020: 000000 000000 040100 040100 163302 034000 000000 074223
00030: 040100 000000 000000 000000 000000 000000 000000 000000
00040: 000401 000401 000000 000401 000000 000000 000000 000000
00050: 000000 000000 040140 000000 000000 000000 000000 000000
00060: 000000 000403 000000 000000 000000 000100 000000 000000
00070: SAME: TO 000200-1

*T RECORD 23 (%27, #17)
00000: 036000 060156 150131 000134 000000 000001 000000 000000
00010: 000000 000000 000000 000000 000000 004034 037177 077577
00020: 000000 000000 000000 000000 004014 007017 000000 007417
00030: 000000 000000 000000 004030 000000 034170 074170 000000
00040: 000000 000000 000000 004010 124716 023000 074313 016034
00050: 000000 037076 000000 000000 000000 004010 000000 006014
00060: 007016 000000 000000 000000 000000 004010 014030 034070
00070: 003417 017477 000000 077577 000000 000000 000000 000000
00100: SAME: TO 000200-1

*T RECORD 24 (%30, #18)
00000: 017400 060126 026242 000212 000000 000000 000000 000000
00010: 000001 001407 000000 017577 000000 000000 000000 070170
00020: 000000 076176 077577 000000 000000 000000 000000 000100
00030: 060160 076177 000000 000000 000000 000000 057627 000000
00040: SAME: TO 000200-1

*T RECORD 25 (%31, #19)
```

```
00000: 002000 120000 120000 000000 000000 000000 000000 000000
00010: SAME: TO 000200-1

*T RECORD 26 (%32, #1A)
00000: 025000 020000 053315 077113 050104 030440 006034 000000
00010: SAME: TO 000020-1
00020: 000000 020040 045505 054520 040504 051440 042105 043111
00030: 047111 052111 047516 020074 034460 030071 031065 027061
00040: 033462 031476 020040 020040 020040 020040 020040 020040
00050: 020040 020040 000000 000000 000000 000000 000000 000000
00060: SAME: TO 000200-1

*T RECORD 27 (%33, #1B)
00000: 003400 040001 037620 077113 050104 030400 000000 000000
00010: SAME: TO 000200-1

*T RECORD 28 (%34, #1C)
00000: 036000 060156 047103 000000 000000 006033 034000 074371
00010: 020102 040503 000000 045440 100004 000210 000551 000005
00020: 000000 000001 074371 000000 052525 052505 000000 052524
00030: 000000 052525 052525 052501 000000 000000 000000 000000
00040: 000000 054525 000000 000000 000000 000000 052525 000000
00050: 000000 000000 000000 052525 052525 052525 000000 052525
00060: 052525 052525 052525 052525 000000 000000 052524 052124
00070: 020400 010000 000000 052525 000000 000000 000000 000000
00100: SAME: TO 000200-1

*T RECORD 29 (%35, #1D)
00000: 036000 060156 012273 000056 000000 052525 052525 052525
00010: 052525 052525 000000 000001 052525 052525 053125 052524
00020: 000000 052625 052400 052525 125241 034000 000000 074461
00030: 052525 052525 052525 052525 000000 052525 052525 000120
00040: 052525 052400 000000 000402 012405 052100 040025 000000
00050: 000000 000125 000124 000125 000000 000125 000000 000125
00060: 000025 000000 000000 000000 000000 000000 000125 000000
00070: 000000 000000 000000 000125 000000 000000 000000 000000
00100: SAME: TO 000200-1

*T RECORD 30 (%36, #1E)
00000: 036000 060156 171521 000134 000000 000000 000000 000000
00010: 000125 000125 000000 000125 000125 000125 000125 000125
00020: 000000 000125 000000 000124 000124 000000 000000 000000
00030: 000125 000125 000125 000125 000000 000125 000125 000000
00040: 000125 000125 000000 000125 153344 034000 074551 000125
00050: 000000 000125 000000 000125 000125 000125 000000 000125
00060: 000125 000125 000125 000100 000000 000125 000000 000001
00070: 000005 000000 000000 000125 000000 000000 000000 000000
00100: SAME: TO 000200-1

*T RECORD 31 (%37, #1F)
00000: 036000 060156 020140 000212 000000 100004 000002 000047
00010: 000357 000041 000000 000000 000000 100004 000002 000047
00020: 000000 000357 000041 177777 177777 100004 000000 000002
00030: 000047 000424 000041 000000 000000 000000 100004 000002
00040: 000047 000424 000000 000041 177777 177777 100004 000002
00050: 000000 000047 000471 000041 000000 000000 000000 100004
00060: 000002 000047 000471 102575 000000 034000 074641 000041
00070: 177777 177777 000000 100004 000000 000000 000000 000000
```

64

```
00100: SAME: TO 000200-1

*T RECORD 32 (%40, #20)
00000: 036000 060156 066025 000270 000000 000002 000047 000536
00010: 000041 000000 000000 000000 100004 000002 000047 000536
00020: 000000 000041 177777 177777 100004 000056 000000 000047
00030: 000357 000041 000000 000000 000000 100004 000056 000047
00040: 000357 000041 000000 177777 177777 100004 000056 000047
00050: 000000 000424 000041 000000 000000 100004 000000 000056
00060: 000047 000424 000041 177777 000000 177777 100004 000056
00070: 000047 000471 000000 000041 000000 000000 000000 000000
00100: SAME: TO 000200-1

*T RECORD 33 (%41, #21)
00000: 036000 060156 121663 000346 000000 000000 000000 100004
00010: 000056 000047 000000 000471 103105 034000 074731 000041
00020: 000000 177777 177777 100004 000056 000047 000000 000536
00030: 000041 000000 000000 100004 000000 000056 000047 000536
00040: 000041 177777 000000 177777 100004 000132 000047 000357
00050: 000000 000041 000000 000000 100004 000132 000000 000047
00060: 000357 000041 177777 177777 000000 100004 000132 000047
00070: 000424 000041 000000 000000 000000 000000 000000 000000
00100: SAME: TO 000200-1

*T RECORD 34 (%42, #22)
00000: 036000 060156 022367 000424 000000 000000 100004 000132
00010: 000047 000424 000000 000041 177777 177777 100004 000132
00020: 000000 000047 000471 000041 000000 000000 000000 100004
00030: 000132 000047 000471 103735 000000 034000 075021 000041
00040: 177777 177777 000000 100004 000132 000047 000536 000041
00050: 000000 000000 000000 100004 000132 000047 000000 000536
00060: 000041 177777 177777 100004 000000 000000 000000 000005
00070: 000000 000000 000000 100004 000000 000000 000000 000000
00100: SAME: TO 000200-1

*T RECORD 35 (%43, #23)
00000: 036000 060156 036434 000502 000000 000000 000050 000000
00010: 000021 177777 000000 177777 000004 000004 000004 000004
00020: 000000 000060 000060 000060 000060 000134 000000 000134
00030: 000134 000134 000372 000364 000000 000437 000431 000504
00040: 000476 000551 000000 000543 000372 000364 000437 000431
00050: 000000 000504 000476 110326 034000 075111 000000 000551
00060: 000543 000372 000364 000437 000000 000431 000504 000476
00070: 000551 000543 000000 074572 000000 000000 000000 000000
00100: SAME: TO 000200-1

*T RECORD 36 (%44, #24)
00000: 036000 060156 116525 000560 000000 074601 074610 074617
00010: 074626 074635 000000 074644 074653 074662 074671 074700
00020: 000000 074707 074716 074725 074734 074743 000000 074752
00030: 074761 074770 074777 075006 000000 075015 075024 075033
00040: 076003 076007 000000 076013 076017 076023 076027 076033
00050: 000000 076037 076043 076047 076053 076057 000000 076074
00060: 076100 076104 076110 076114 000000 076120 076124 076130
00070: 076134 076140 000000 116675 000000 000000 000000 000000
00100: SAME: TO 000200-1

*T RECORD 37 (%45, #25)
```

```
00000: 036000 060156 113500 000636 000000 034000 075201 076144
00010: 076150 076256 000000 076262 076266 076272 076276 076302
00020: 000000 076306 076312 076316 076322 076326 000000 076332
00030: 076402 076406 076412 076416 000000 076422 076426 076432
00040: 076436 076442 000000 076446 076452 076456 076553 076557
00050: 000000 076563 076567 076573 076577 076603 000000 076607
00060: 076613 076446 076617 076623 000000 076640 076644 076650
00070: 076654 076660 000000 076664 000000 000000 000000 000000
00100: SAME: TO 000200-1

*T RECORD 38 (%46, #26)
00000: 036000 060156 027657 000714 000000 076670 076674 076700
00010: 076704 076710 000000 076714 076767 076773 076777 077003
00020: 000000 077007 077013 161706 034000 075271 000000 077017
00030: 077023 077027 077033 077037 000000 077043 077143 077147
00040: 077153 077157 000000 102571 076402 077163 076412 076442
00050: 000000 076007 077167 076613 077267 077273 000000 077277
00060: 077303 077307 077313 077317 000000 077323 077327 077333
00070: 077337 077343 000000 076553 000000 000000 000000 000000
00100: SAME: TO 000200-1

*T RECORD 39 (%47, #27)
00000: 036000 060156 063633 000772 000000 076557 076563 076567
00010: 076573 076577 000000 077347 076607 076613 076446 076617
00020: 000000 076623 076402 077372 077153 077376 000000 077402
00030: 076603 077347 076607 076613 000000 076446 076617 077406
00040: 077267 077273 000000 013701 034000 075361 077277 077303
00050: 000000 077412 077313 077317 077323 077327 000000 077333
00060: 077337 077343 077440 077444 000000 077450 077454 077460
00070: 077464 077470 000000 077474 000000 000000 000000 000000
00100: SAME: TO 000200-1

*T RECORD 40 (%50, #28)
00000: 036000 060156 146246 001050 000000 077500 077504 077510
00010: 077514 077542 000000 077546 077552 077556 077562 077566
00020: 000000 077572 077576 077602 077606 077612 000000 077616
00030: 077667 077673 076412 076412 000000 076573 076577 077347
00040: 076412 077677 000000 077703 077707 076412 100155 100161
00050: 000000 100165 100171 100175 100201 100205 000000 100211
00060: 100215 100221 050500 034000 000000 075451 100225 100231
00070: 100273 076644 000000 076650 000000 000000 000000 000000
00100: SAME: TO 000200-1

*T RECORD 41 (%51, #29)
00000: 036000 060156 020356 001126 000000 076654 100277 076664
00010: 076670 076674 000000 100303 076704 076710 076714 076402
00020: 000000 076412 076412 076567 076573 076577 000000 077347
00030: 100307 076613 076446 076617 000000 076623 076640 076644
00040: 076650 076654 000000 076660 076664 076670 076674 100303
00050: 000000 076704 076710 076714 077743 077747 000000 077753
00060: 077757 077763 077767 077773 000000 077777 100003 100007
00070: 100013 100017 000000 100075 000000 000000 000000 000000
00100: SAME: TO 000200-1

*T RECORD 42 (%52, #2A)
00000: 036000 060156 104660 001204 000000 100101 100105 100111
00010: 100115 100121 000000 033765 034000 075541 100125 100131
00020: 000000 100135 100141 100145 100151 075153 000000 075167
```

66

```
00030: 075203 075217 075233 075247 000000 075263 075277 075313
00040: 075327 075343 000000 075357 075373 075407 075407 075423
00050: 000000 075437 075453 075467 075503 101422 000000 101436
00060: 101452 101466 075153 101502 000000 101516 101532 101546
00070: 101562 101576 000000 101612 000000 000000 000000 000000
00100: SAME: TO 000200-1

*T RECORD 43 (%53, #2B)
00000: 036000 060156 030221 001262 000000 101626 101642 101656
00010: 101672 101706 000000 101722 101736 101752 101766 102002
00020: 000000 102016 102032 102046 102062 102076 000000 102112
00030: 102126 102142 076424 034000 000000 075631 102156 102172
00040: 102206 102222 000000 102236 102252 102266 102302 075517
00050: 000000 075533 041522 051517 051040 041517 000000 046117
00060: 051040 052105 054124 020040 000000 041517 046117 051040
00070: 046501 051513 000000 020040 000000 000000 000000 000000
00100: SAME: TO 000200-1

*T RECORD 44 (%54, #2C)
00000: 036000 060156 174307 001340 000000 041517 046117 051040
00010: 046501 051513 000000 020040 054120 051116 052040 041517
00020: 000000 046117 051040 020102 027527 020040 000000 020040
00030: 041440 020040 020040 046440 000000 020040 020040 054440
00040: 020040 020040 000000 041040 020040 041522 051517 051040
00050: 000000 051510 025715 034000 075721 040520 000000 042440
00060: 051105 051505 052040 041510 000000 040516 043440 044117
00070: 051524 051440 000000 020040 000000 000000 000000 000000
00100: SAME: TO 000200-1

*T RECORD 45 (%55, #2D)
00000: 036000 060156 155542 001416 000000 020040 020040 053103
00010: 052117 051040 000000 051103 052116 043440 020040 030440
00020: 000000 020040 020040 031040 020040 020040 000000 031440
00030: 020040 020040 032040 020040 000000 020040 032440 020040
00040: 020040 033040 000000 020040 020040 033440 020040 020040
00050: 000000 034040 020040 020040 034440 020040 000000 020040
00060: 030040 020040 000001 000401 000000 075643 075643 000005
00070: 000401 105465 000000 034000 000000 000000 000000 000000
00100: SAME: TO 000200-1

*T RECORD 46 (%56, #2E)
00000: 036000 060156 032250 001474 000000 076011 075651 075651
00010: 000007 004401 000000 076720 076726 000012 004405 075673
00020: 000000 075673 000002 003000 075701 075701 000000 000004
00030: 003000 075704 075704 000006 000000 003000 075707 075707
00040: 000010 003000 000000 075712 075712 000015 000401 075715
00050: 000000 075715 000013 000401 075726 075726 000000 000041
00060: 004401 100313 100321 000014 000000 000000 075723 075723
00070: 020040 027040 000000 020040 000000 000000 000000 000000
00100: SAME: TO 000200-1

*T RECORD 47 (%57, #2F)
00000: 036000 060156 053453 001552 000000 020040 026440 020040
00010: 047517 050123 000000 020040 130007 002000 075767 075767
00020: 000000 130004 055031 034000 076101 002000 000000 075756
00030: 075756 130001 002000 075745 000000 075745 130012 000000
00040: 076066 076071 000000 130010 002000 075772 075772 130005
00050: 000000 002000 075761 075761 130002 002000 000000 075750
```

```
00060: 075750 130000 002000 076000 000000 076000 130011 002000
00070: 075775 075775 000000 130006 000000 000000 000000 000000
00100: SAME: TO 000200-1


*T RECORD 48 (%60, #30)
00000: 036000 060156 125252 001630 000000 002000 075764 075764
00010: 130003 002000 000000 075753 075753 130013 002000 076063
00020: 000000 076063 055117 047515 036440 046507 000000 047106
00030: 054440 046517 053105 020040 000000 046105 043124 020040
00040: 047105 146154 000000 034000 076171 054124 020040 051503
00050: 000000 051116 020040 043125 046114 020040 000000 042105
00060: 052101 046040 046517 053105 000000 020040 020125 050040
00070: 020040 051117 000000 052516 000000 000000 000000 000000
00100: SAME: TO 000200-1


*T RECORD 49 (%61, #31)
00000: 036000 060156 113214 001706 000000 042040 041522 051517
00010: 051040 046517 000000 053105 020040 042117 053516 020040
00020: 000000 055117 047515 020040 043101 041524 000000 051040
00030: 046517 053105 020040 051111 000000 043510 052040 043125
00040: 046114 020040 000000 050111 041524 051040 051503 051105
00050: 000000 047040 046131 047525 052040 130035 000000 000401
00060: 076154 175221 034000 076261 000000 076154 130022 000401
00070: 076162 076162 000000 130015 000000 000000 000000 000000
00100: SAME: TO 000200-1


*T RECORD 50 (%62, #32)
00000: 036000 060156 033755 001764 000000 000401 076170 076170
00010: 130017 000401 000000 076176 076176 130020 000401 076204
00020: 000000 076204 130030 000401 076212 076212 000000 130021
00030: 000401 076220 076220 130031 000000 000401 076226 076226
00040: 130131 004405 000000 076250 076250 130023 000401 076234
00050: 000000 076234 000014 000000 075723 075723 000000 130016
00060: 000401 076242 076242 042105 000000 047123 020040 020123
00070: 042524 020040 000000 047522 000000 000000 000000 000000
00100: SAME: TO 000200-1


*T RECORD 51 (%63, #33)
00000: 036000 060156 164336 002042 000000 043511 047040 046511
00010: 041522 046260 000000 034000 076351 047440 042105 047123
00020: 000000 020040 050122 044516 052040 041517 000000 047522
00030: 042040 040516 043514 042440 000000 040516 043514 042440
00040: 040503 052111 000000 053040 043111 046105 020040 050101
00050: 000000 051115 051440 130051 003000 076336 000000 076336
00060: 130077 007401 076341 076341 000000 000000 000000 075734
00070: 075734 000075 000000 003000 000000 000000 000000 000000
00100: SAME: TO 000200-1


*T RECORD 52 (%64, #34)
00000: 036000 060156 174131 002120 000000 076363 076363 000000
00010: 000000 075734 000000 075734 000000 000000 075734 075734
00020: 000000 000000 000000 075734 075734 000076 000000 007401
00030: 076366 043335 034000 076441 000000 076366 130061 000401
00040: 076347 076347 000000 130032 000401 076355 076355 000000
00050: 000000 000000 075734 075734 130207 000401 000000 076374
00060: 076374 041514 047523 042440 000000 041517 047124 051040
00070: 050122 052103 000000 052040 000000 000000 000000 000000
00100: SAME: TO 000200-1
```

68

```
*T RECORD 53 (%65, #35)
00000: 036000 060156 020725 002176 000000 020117 047040 020040
00010: 050122 052103 000000 052040 020117 043106 020040 044111
00020: 000000 043510 052040 053511 042124 044040 000000 040504
00030: 045123 052040 041517 046117 000000 051040 052110 044503
00040: 045440 047105 000000 051523 020040 046501 051113 020040
00050: 000000 124146 034000 076531 051503 040516 000000 020040
00060: 050117 047124 051440 041517 000000 046117 051040 020102
00070: 040522 020060 000000 052111 000000 000000 000000 000000
00100: SAME: TO 000200-1

*T RECORD 54 (%66, #36)
00000: 036000 060156 157723 002254 000000 047124 027440 052122
00010: 040516 051456 000000 130104 000401 076545 076545 130043
00020: 000000 000401 076537 076537 130015 000401 000000 076531
00030: 076170 130067 003000 076526 000000 076526 130064 007401
00040: 076470 076470 000000 130065 007401 076476 076476 130066
00050: 000000 004405 076504 076504 130037 007401 000000 076462
00060: 076462 130060 007401 076753 000000 076753 130055 007401
00070: 050140 034000 000000 076621 000000 000000 000000 000000
00100: SAME: TO 000200-1

*T RECORD 55 (%67, #37)
00000: 036000 060156 066737 002332 000000 076520 076520 130072
00010: 007401 076512 000000 076512 052102 046124 020040 051520
00020: 000000 040514 020040 041517 047522 042040 000000 130120
00030: 004405 100235 100235 130106 000000 000401 077201 077201
00040: 130111 000000 000000 077207 077207 130113 000401 077212
00050: 000000 077212 130130 000400 076635 076635 000000 130107
00060: 000000 077226 077226 130053 000000 004405 100243 100243
00070: 130114 000000 000000 077237 000000 000000 000000 000000
00100: SAME: TO 000200-1

*T RECORD 56 (%70, #38)
00000: 036000 060156 046551 002410 000000 077237 130132 004405
00010: 076627 076627 000000 130110 000401 077242 077242 130112
00020: 000000 014053 034000 076711 000000 077250 000000 077250
00030: 130115 000401 077253 077253 000000 052056 041516 052040
00040: 041517 046117 000000 051040 052056 041516 052040 054120
00050: 000000 051116 052040 047456 041516 052040 000000 041517
00060: 046117 051040 030056 041516 000000 052040 054120 051116
00070: 052040 052122 000000 040516 000000 000000 000000 000000
00100: SAME: TO 000200-1

*T RECORD 57 (%71, #39)
00000: 036000 060156 136771 002466 000000 051440 040522 042501
00010: 020040 047125 000000 046502 020040 040522 042501 020040
00020: 000000 051524 052125 051440 000737 002000 000000 075767
00030: 075767 000437 002000 075756 000000 075756 000137 002000
00040: 055762 034000 000000 077001 075745 075745 000035 002000
00050: 000000 076066 076066 001037 002000 075772 000000 075772
00060: 000537 002000 075761 075761 000000 000237 002000 075750
00070: 075750 000037 000000 002000 000000 000000 000000 000000
00100: SAME: TO 000200-1

*T RECORD 58 (%72, #3A)
00000: 036000 060156 004373 002544 000000 076000 076000 001137
```

69

```
00010: 002000 075775 000000 075775 000637 002000 075764 075764
00020: 000000 000337 002000 075753 075753 000036 000000 002000
00030: 076063 076063 043522 040520 000000 044040 041517 046117
00040: 051040 043522 000000 040520 044040 054120 051116 052040
00050: 000000 041105 043117 051040 040506 052105 000000 051040
00060: 117656 034000 077071 050117 000000 044516 052040 041517
00070: 046117 051040 000000 046117 000000 000000 000000 000000
00100: SAME: TO 000200-1


*T RECORD 59 (%73, #3B)
00000: 036000 060156 110311 002622 000000 041501 046040 050117
00010: 044516 052040 000000 041514 047523 042440 043522 047525
00020: 000000 050040 040503 052111 053040 041517 000000 046117
00030: 051040 040503 052111 053040 000000 054120 051116 052040
00040: 047056 040503 000000 052040 041517 046117 051040 047056
00050: 000000 040503 052040 054120 051116 052040 000000 000471
00060: 002411 077063 077063 000003 000000 004401 077127 077135
00070: 000007 004401 000000 077113 000000 000000 000000 000000
00100: SAME: TO 000200-1


*T RECORD 60 (%74, #3C)
00000: 036000 060156 155167 002700 000000 077121 000671 007401
00010: 051727 034000 000000 077161 077077 077077 130075 000401
00020: 000000 077105 077105 000571 004401 077047 000000 077055
00030: 051505 046103 052040 046101 000000 054505 051040 052117
00040: 050040 020040 000000 046105 043124 020040 046105 043124
00050: 000000 020040 041117 052117 046440 046105 000000 043124
00060: 020040 051505 046103 052040 000000 051117 052101 052040
00070: 020124 047520 000000 020040 000000 000000 000000 000000
00100: SAME: TO 000200-1


*T RECORD 61 (%75, #3D)
00000: 036000 060156 125547 002756 000000 051117 052516 042040
00010: 041505 047124 000000 051040 041117 052117 046440 020124
00020: 000000 047520 020040 051111 043510 052040 000000 051111
00030: 156131 034000 077251 043510 000000 052040 041117 052117
00040: 046440 051111 000000 043510 052040 051505 046103 052040
00050: 000000 040530 044523 020040 001417 000401 000000 077173
00060: 077173 002722 007401 077201 000000 077201 003222 003000
00070: 077207 077207 000000 003522 000000 000000 000000 000000
00100: SAME: TO 000200-1


*T RECORD 62 (%76, #3E)
00000: 036000 060156 126576 003034 000000 007401 077212 077212
00010: 000016 007401 000000 077220 077220 003022 003000 077226
00020: 000000 077226 003322 007401 077231 077231 000000 003622
00030: 003000 077237 077237 005217 000000 007401 077261 077261
00040: 003122 007401 000000 077242 077242 003422 003000 021662
00050: 000000 034000 077341 077250 077250 003722 000000 007401
00060: 077253 077253 130013 000000 000000 077361 077361 051510
00070: 040522 050040 000000 051117 000000 000000 000000 000000
00100: SAME: TO 000200-1


*T RECORD 63 (%77, #3F)
00000: 036000 060156 131427 003112 000000 052516 042040 020124
00010: 042522 020040 000000 041122 052523 044040 046505 047125
00020: 000000 020040 130210 000401 077364 077364 000000 000003
00030: 004401 076734 076742 130070 000000 004405 077353 077353
```

70

```
00040: 130056 000401 000000 076761 076761 000040 007401 077220
00050: 000000 077220 050111 041524 020040 046101 000000 054505
00060: 051040 041117 052110 020040 000000 046101 054505 056073
00070: 034000 077431 000000 051040 000000 000000 000000 000000
00100: SAME: TO 000200-1
```

```
*T RECORD 64 (%100, #40)
00000: 036000 060156 016756 003170 000000 046501 051513 020040
00010: 046101 054505 000000 051040 002221 007401 077416 077416
00020: 000000 000000 000000 075734 075734 000000 000000 000000
00030: 075734 075734 000000 000000 000000 075734 075734 005221
00040: 007401 077424 000000 077424 000000 000000 075734 075734
00050: 000000 000000 000000 075734 075734 000000 000000 000000
00060: 075734 075734 001021 007401 000000 077432 077432 000000
00070: 000000 075734 000000 075734 000000 000000 000000 000000
00100: SAME: TO 000200-1
```

```
*T RECORD 65 (%101, #41)
00000: 036000 060156 023315 003246 000000 000000 000000 075734
00010: 075734 000000 000000 000000 075734 075734 051505 145366
00020: 000000 034000 077521 046103 052040 050111 000000 041524
00030: 020040 051505 046103 052040 000000 043122 040515 042440
00040: 043122 040515 000000 042440 041517 046117 051040 002017
00050: 000000 000401 077173 077173 004011 007401 000000 077201
00060: 077201 004311 003000 077207 000000 077207 004611 007401
00070: 077212 077212 000000 000062 000000 000000 000000 000000
00100: SAME: TO 000200-1
```

```
*T RECORD 66 (%102, #42)
00000: 036000 060156 063242 003324 000000 000401 077534 077534
00010: 004111 003000 000000 077226 077226 004411 007401 077231
00020: 000000 077231 004711 003000 077237 077237 000000 000000
00030: 000000 075734 075734 004211 000000 007401 077242 032543
00040: 034000 077611 000000 077242 004511 003000 077250 077250
00050: 000000 005011 007401 077253 077253 020123 000000 044532
00060: 042440 130144 000000 077622 000000 077622 052122 040516
00070: 051440 020117 000000 047040 000000 000000 000000 000000
00100: SAME: TO 000200-1
```

```
*T RECORD 67 (%103, #43)
00000: 036000 060156 165104 003402 000000 020040 052122 040516
00010: 051440 020117 000000 043106 020040 041517 047124 051040
00020: 000000 020117 047040 020040 041517 047124 000000 051040
00030: 020117 043106 020040 041517 000000 047124 051040 043125
00040: 046114 020040 000000 130050 007401 077631 077631 130041
00050: 000000 007401 077637 077637 130034 007401 000000 012543
00060: 034000 077701 077645 077645 000000 130040 007401 077653
00070: 077653 130057 000000 004405 000000 000000 000000 000000
00100: SAME: TO 000200-1
```

```
*T RECORD 68 (%104, #44)
00000: 036000 060156 145221 003460 000000 077661 077661 020106
00010: 044530 020040 000000 020106 051117 046440 020106 044530
00020: 000000 020040 020040 052117 020040 040514 000000 044507
00030: 047040 041525 051123 051040 000000 041525 051123 051040
00040: 020040 020040 000000 020040 000000 000000 075734 075734
00050: 000000 000000 000000 075734 075734 000000 000000 000000
00060: 075734 075734 002667 007401 000000 077713 077713 000000
```

71

```
00070: 000000 075734 000000 075734 000000 000000 000000 000000
00100: SAME: TO 000200-1

*T RECORD 69 (%105, #45)
00000: 036000 060156 170720 003536 000000 003067 007401 067341
00010: 034000 077771 000000 077727 077727 003167 003000 077735
00020: 000000 077735 002767 007401 077721 077721 000000 000000
00030: 000000 075734 075734 000000 000000 000000 075734 075734
00040: 000000 000000 000000 075734 075734 000000 000000 075734
00050: 000000 075734 020104 044523 052040 020114 000000 047527
00060: 020040 020104 044523 052040 000000 020115 042504 020040
00070: 020104 044523 000000 052040 000000 000000 000000 000000
00100: SAME: TO 000200-1

*T RECORD 70 (%106, #46)
00000: 036000 060156 174330 003614 000000 020110 044507 044040
00010: 020123 044101 000000 050105 020123 050122 046040 020123
00020: 000000 044101 050105 020110 050122 046040 000000 065313
00030: 034000 100061 020123 044101 000000 050105 020110 050122
00040: 051440 020123 000000 044101 050105 020104 050122 046040
00050: 000000 000000 000000 075734 075734 000000 000000 000000
00060: 075734 075734 000000 000000 000000 075734 075734 000000
00070: 000000 075734 000000 075734 000000 000000 000000 000000
00100: SAME: TO 000200-1

*T RECORD 71 (%107, #47)
00000: 036000 060156 123262 003672 000000 000000 000000 075734
00010: 075734 130146 000000 007401 100023 100023 130147 007401
00020: 000000 100031 100031 130150 007401 100037 000000 100037
00030: 130151 007401 100045 100045 000000 130152 007401 100053
00040: 100053 130153 000000 007401 100061 100061 143374 034000
00050: 000000 100151 130154 007401 100067 100067 000000 004320
00060: 007401 077416 077416 000000 000000 000000 075734 075734
00070: 000000 000000 000000 075734 000000 000000 000000 000000
00100: SAME: TO 000200-1

*T RECORD 72 (%110, #48)
00000: 036000 060156 116561 003750 000000 075734 000000 000000
00010: 075734 075734 000000 007320 007401 077424 077424 000000
00020: 000000 000000 075734 075734 000000 000000 000000 075734
00030: 075734 000000 000000 075734 000000 075734 003020 007401
00040: 077432 077432 000000 000000 000000 075734 075734 000000
00050: 000000 000000 075734 075734 000000 000000 000000 075734
00060: 075734 040504 045123 052040 000000 046517 063755 034000
00070: 100241 053105 000000 020040 000000 000000 000000 000000
00100: SAME: TO 000200-1

*T RECORD 73 (%111, #49)
00000: 036000 060156 065567 004026 000000 020040 042110 020040
00010: 020040 042127 000000 020040 042105 043111 047040 042105
00020: 000000 046105 052040 020102 046040 020040 000000 040514
00030: 044507 047040 020102 046040 000000 020040 052131 050105
00040: 020040 130116 000000 004405 100251 100251 130117 000401
00050: 000000 100265 100265 000000 000000 075734 000000 075734
00060: 130121 000401 100257 100257 000000 020102 046040 020040
00070: 041517 046117 000000 051040 000000 000000 000000 000000
00100: SAME: TO 000200-1
```

72

EP 0 455 351 A2

```
*T RECORD 74 (%112, #4A)
00000: 036000 060156 130115 004104 000000 020102 046040 020040
00010: 054120 051116 000000 052040 000001 000201 102673 001000
00020: 000000 100331 000003 000000 100334 002000 000000 100335
00030: 000356 000577 000004 000000 000000 101516 002000 100350
00040: 000205 000255 000000 000001 000000 101033 002000 100356
00050: 000000 000535 000577 000001 000000 101713 000000 003400
00060: 100371 100004 000001 000201 000000 000356 000222 000000
00070: 000000 001377 000000 003400 000000 000000 000000 000000
00100: SAME: TO 000200-1

*T RECORD 75 (%113, #4B)
00000: 036000 060156 025165 004162 000000 100402 100004 000205
00010: 000051 000535 000000 000043 000000 000000 001464 002000
00020: 000000 100413 000044 000242 000003 000000 000000 100724
00030: 002000 100422 000565 000600 000000 000001 000000 102010
00040: 034000 100431 000000 000002 000003 000000 051520 040503
00050: 000000 042440 046505 051525 051040 052524 000000 044514
00060: 020040 100001 000047 000565 000000 000020 000001 100434
00070: 020040 020040 000000 020040 000000 000000 000000 000000
00100: SAME: TO 000200-1

*T RECORD 76 (%114, #4C)
00000: 036000 060156 116654 004240 000000 020040 020040 020040
00010: 052524 044514 000000 020040 100001 000047 000565 000020
00020: 000000 000001 100453 000000 177777 000000 000000 177777
00030: 000000 177777 000000 177777 000000 001400 177777 000000
00040: 177777 000000 000000 177777 000000 177777 001400 001777
00050: 000000 052000 177777 000000 177777 000000 000000 167543
00060: 034000 100521 177777 006000 000000 177777 000000 177777
00070: 000000 177777 000000 000000 000000 000000 000000 000000
00100: SAME: TO 000200-1

*T RECORD 77 (%115, #4D)
00000: 036000 060156 053345 004316 000000 177777 006000 006377
00010: 050400 177777 000000 000000 177777 000000 177777 030000
00020: 000000 177777 000000 177777 000000 177777 000000 000000
00030: 177777 030000 030377 042400 000000 177777 000000 177777
00040: 000000 177777 000000 140000 177777 000000 177777 000000
00050: 000000 177777 000000 177777 140000 140377 000000 012400
00060: 177777 000000 177777 000000 000000 177777 000300 000377
00070: 053000 177777 000000 000000 000000 000000 000000 000000
00100: SAME: TO 000200-1

*T RECORD 78 (%116, #4E)
00000: 036000 060156 120376 004374 000000 177777 000000 075365
00010: 034000 100611 000000 177777 000300 000377 125000 177777
00020: 000000 000000 177777 000000 177777 000000 000000 177777
00030: 000000 177777 000300 177777 000000 000000 177777 000000
00040: 177777 000000 000000 177777 000000 177777 000000 177777
00050: 000000 000000 000000 053125 177777 000000 000000 000000
00060: 000125 177777 000000 177777 000000 000000 177777 000000
00070: 177777 000000 000000 177777 000000 000000 000000 000000
00100: SAME: TO 000200-1

*T RECORD 79 (%117, #4F)
00000: 036000 060156 175627 004452 000000 000000 000000 000000
00010: SAME: TO 000020-1
```

73

```
00020: 000000 052525 177777 000000 000000 000026 000000 155012
00030: 034000 100701 177777 000000 000000 000000 052526 177777
00040: 000000 000000 000000 000025 177777 000000 000000 053125
00050: 000000 177777 000000 000000 000025 177777 000000 000003
00060: 176377 000400 177777 000000 000000 000374 000001 177777
00070: 000000 176374 000000 000401 000000 000000 000000 000000
00100: SAME: TO 000200-1

*T RECORD 80 (%120, #50)
00000: 036000 060156 054763 004530 000000 177777 000003 177777
00010: 000000 177777 000000 001400 177774 000001 177777 000000
00020: 000000 000374 000001 177777 000000 000000 000000 052131
00030: 177777 000000 000000 000125 000000 177777 000000 000000
00040: 054125 177777 000000 000000 000000 000125 155730 034000
00050: 000000 100771 177777 000000 000000 052125 000000 177777
00060: 000000 000000 000131 177777 000000 000000 000000 052145
00070: 177777 000000 000000 000000 000000 000000 000000 000000
00100: SAME: TO 000200-1

*T RECORD 81 (%121, #51)
00000: 036000 060156 040606 004606 000000 000125 177777 000000
00010: 000000 062525 000000 177777 000000 000000 000125 177777
00020: 000000 000000 000000 052125 177777 000000 000000 000000
00030: 000145 177777 000000 000000 000000 052225 177777 000000
00040: 000000 000125 000000 177777 000000 000000 112125 177777
00050: 000000 000000 000000 000125 177777 000000 000000 000000
00060: 052125 177777 000000 000000 000000 000225 022065 034000
00070: 101061 177777 000000 000000 000000 000000 000000 000000
00100: SAME: TO 000200-1

*T RECORD 82 (%122, #52)
00000: 036000 060156 106120 004664 000000 001403 052130 177777
00010: 000000 000003 000000 000124 177777 000000 001403 054124
00020: 000000 177777 000000 000003 000124 177777 000000 000000
00030: 001403 052124 177777 000000 000000 000003 000130 177777
00040: 000000 001403 000000 052144 177777 000000 000003 000124
00050: 000000 177777 000000 001403 062124 177777 000000 000000
00060: 000000 000124 177777 000000 000000 001403 052124 177777
00070: 000000 000003 000000 000144 000000 000000 000000 000000
00100: SAME: TO 000200-1

*T RECORD 83 (%123, #53)
00000: 036000 060156 123575 004742 000000 177777 000000 001403
00010: 052224 177777 000000 000000 000003 000124 176112 034000
00020: 000000 101151 177777 000000 001403 112124 000000 177777
00030: 000000 000003 000124 177777 000000 000000 001403 052124
00040: 177777 000000 000000 000003 000224 177777 001400 177777
00050: 000000 000000 177777 000000 177777 000000 000000 177777
00060: 006000 177777 000000 177777 000000 000000 177777 000000
00070: 177777 030000 000000 177777 000000 000000 000000 000000
00100: SAME: TO 000200-1

*T RECORD 84 (%124, #54)
00000: 036000 060156 013301 005020 000000 000000 177777 000000
00010: 177777 000000 000000 177777 140000 177777 000000 177777
00020: 000000 000000 177777 000000 177777 000003 000000 177777
00030: 000000 177777 000000 177777 000000 000000 070360 034000
00040: 101241 177777 000000 000000 000000 000000 000000 000000
```

74

```
00050: 000000 000000 000000 000000 000300 177777 000000 000000
00060: 177777 000000 177777 000000 000000 177777 140000 177777
00070: 000000 177777 000000 000000 000000 000000 000000 000000
00100: SAME: TO 000200-1
```

*T RECORD 85 (%125, #55)
```
00000: 036000 060156 160634 005076 000000 177777 000000 177777
00010: 031400 031400 000000 000000 177777 000000 000000 000000
00020: 000000 177777 000000 177777 000000 177777 000000 000060
00030: 177777 000000 177777 000000 000000 001403 050130 177777
00040: 000000 000003 000000 000124 177777 000000 001403 050124
00050: 000000 177777 000000 000003 000130 050343 000000 031000
00060: 101331 177777 000000 001403 000000 060124 177777 000000
00070: 000003 000124 000000 177777 000000 000000 000000 000000
00100: SAME: TO 000200-1
```

*T RECORD 86 (%126, #56)
```
00000: 036000 060156 040531 005154 000000 000000 001403 050224
00010: 177777 000000 000000 000003 000124 177777 000000 001403
00020: 000000 050124 177777 000000 000003 000224 000000 177777
00030: 000000 000000 000000 000000 000000 000020 004000 000020
00040: 002000 000000 000000 000000 000000 000000 000000 000000
00050: SAME: TO 000060-1
00060: 000000 000000 000000 000000 000000 000000 115174 002400
00070: 101413 000000 000000 000000 000000 000000 000000 000000
00100: SAME: TO 000200-1
```

*T RECORD 87 (%127, #57)
```
00000: 036000 060156 152716 005232 000000 000000 000000 000000
00010: 101413 001000 000000 101420 000001 000001 101422 034001
00020: 000000 002332 033760 000000 000443 017000 000000 041660
00030: 000003 000440 017000 031460 000000 002411 020040 005000
00040: 001561 075547 000000 145440 017340 001563 000000 000500
00050: 000000 017340 033760 000000 000504 017300 000000 031460
00060: 000000 000040 017140 033760 000000 002344 150505 005000
00070: 031465 000000 000000 002440 000000 000000 000000 000000
00100: SAME: TO 000200-1
```

*T RECORD 88 (%130, #58)
```
00000: 036000 060156 151640 005310 000000 017034 033760 000000
00010: 000505 017000 000000 037463 000000 000446 017002 041565
00020: 000000 000001 000440 017000 001546 075073 000000 122440
00030: 017340 031760 075044 000440 000000 017360 166635 034001
00040: 002350 001504 000000 000002 000440 017340 033760 000000
00050: 000000 000504 017000 031760 075047 000440 000000 017360
00060: 001563 075057 000440 017340 000000 031760 075043 000440
00070: 017360 041565 000000 000002 000000 000000 000000 000000
00100: SAME: TO 000200-1
```

*T RECORD 89 (%131, #59)
```
00000: 036000 060156 040361 005366 000000 000440 017030 001546
00010: 075123 120440 000000 017340 033760 002415 000500 006000
00020: 000000 041565 000004 000440 017030 001740 000000 000000
00030: 120440 017030 031460 002364 000000 020040 005000 031760
00040: 000002 000040 000000 017030 031760 075046 000040 017360
00050: 000000 023760 000006 000040 017000 110546 000000 034001
00060: 002366 033760 000021 000046 000000 017000 031460 002450
00070: 120040 006000 000000 033760 000000 000000 000000 000000
```

75

```
00100: SAME: TO 000200-1

*T RECORD 90 (%132, #5A)
00000: 036000 060156 064667 005444 000000 075042 000440 017000
00010: 031460 013031 000000 000040 006000 031760 075044 000440
00020: 000000 017340 031460 002411 154040 005000 000000 033760
00030: 000014 000440 017000 001560 000000 000000 000500 017070
00040: 001564 000003 000000 000440 017030 031760 075047 000440
00050: 000000 017360 041565 000010 000440 017030 000000 001740
00060: 000000 120440 017030 031460 000000 002404 020040 005000
00070: 031760 000002 000000 000040 000000 000000 000000 000000
00100: SAME: TO 000200-1

*T RECORD 91 (%133, #5B)
00000: 036000 060156 175720 005522 000000 017030 111702 034001
00010: 002404 031760 000000 075046 000040 017360 033760 000020
00020: 000000 000046 017000 043260 002450 120440 000000 006000
00030: 033760 075042 000440 017000 000000 031460 013031 000040
00040: 006000 034462 000000 000000 000642 017003 103463 000000
00050: 000000 000443 017000 111563 000014 000440 000000 017000
00060: 002333 000000 020040 003000 000000 031461 000000 000420
00070: 015030 031462 000000 000000 000000 000000 000000 000000
00100: SAME: TO 000200-1

*T RECORD 92 (%134, #5C)
00000: 036000 060156 112557 005600 000000 000500 015030 031463
00010: 000000 000500 000000 015030 031464 000000 000500 015030
00020: 000000 031260 000000 000500 015030 126254 000000 034001
00030: 002422 031465 000000 000500 000000 015030 031460 000000
00040: 000100 015000 000000 031460 002745 000040 006000 031460
00050: 000000 000000 000040 011000 033760 000000 000000 000405
00060: 011000 030760 000000 000400 000000 011000 033760 000000
00070: 000404 011000 000000 033760 000000 000000 000000 000000
00100: SAME: TO 000200-1

*T RECORD 93 (%135, #5D)
00000: 036000 060156 023736 005656 000000 000000 000403 011000
00010: 033760 000000 000000 000402 011000 033760 000000 000401
00020: 000000 011000 031760 000000 003400 017010 000000 031460
00030: 000000 000040 007000 031760 000000 101416 000440 017340
00040: 033760 000000 000000 000501 017000 127672 034001 002440
00050: 000000 001561 075547 000440 017340 033760 000000 170000
00060: 000440 017000 001562 000000 000000 000500 017340 031760
00070: 000000 000500 000000 017340 000000 000000 000000 000000
00100: SAME: TO 000200-1

*T RECORD 94 (%136, #5E)
00000: 036000 060156 015611 005734 000000 041560 000000 000500
00010: 017000 033760 000000 000000 022500 017000 030760 000000
00020: 000000 000500 017000 031460 000000 000040 000000 007000
00030: 031760 075044 000440 017340 000000 121560 000000 000500
00040: 017030 031760 000000 075053 000440 017360 031466 000000
00050: 000000 000440 017170 031760 075043 000440 000000 017340
00060: 033760 000003 000440 017000 000000 125005 012001 002456
00070: 121560 000000 000000 000500 000000 000000 000000 000000
00100: SAME: TO 000200-1

*T RECORD 95 (%137, #5F)
```

```
00000: 015000 060122 117066 006012 000000 017030 031760 075051
00010: 000440 017360 000000 033760 075050 000440 017000 031460
00020: 000000 002745 000040 006000 031460 000000 000000 000040
00030: 007000 166734 000000 000000 000000 000000 000000 000000
00040: SAME: TO 000200-1
```

\*T RECORD 96 (%140, #60)
```
00000: 002000 120000 120000 000000 000000 000000 000000 000000
00010: SAME: TO 000200-1
```

\*T RECORD 97 (%141, #61)
```
00000: 025000 020000 152415 077113 050104 031040 003164 000000
00010: SAME: TO 000020-1
00020: 000000 020062 047104 020113 050104 027106 044514 042440
00030: 044517 047111 020074 034460 030071 031065 027061 033462
00040: 034076 020040 020040 020040 020040 020040 020040 020040
00050: 020040 020040 000000 000000 000000 000000 000000 000000
00060: SAME: TO 000200-1
```

\*T RECORD 98 (%142, #62)
```
00000: 003400 040001 040220 077113 050104 031000 000000 000000
00010: SAME: TO 000200-1
```

\*T RECORD 99 (%143, #63)
```
00000: 036000 060156 056354 000000 000000 003163 034000 101422
00010: 076402 102354 000000 102360 102364 102354 102354 102354
00020: 000000 102354 076442 102370 102374 102400 000000 102456
00030: 102462 077153 102466 102472 000000 102476 102502 102506
00040: 102512 102516 000000 102522 102526 102456 102462 077153
00050: 000000 102565 102571 102575 102601 102605 000000 102512
00060: 102516 102522 102611 102456 000000 102462 077153 102354
00070: 102472 102476 000000 102502 000000 000000 000000 000000
00100: SAME: TO 000200-1
```

\*T RECORD 100 (%144, #64)
```
00000: 036000 060156 052237 000056 000000 102506 102512 102516
00010: 102522 102615 000000 076074 076100 076104 102624 076114
00020: 000000 076120 076124 076130 042144 034000 000000 101512
00030: 076134 076140 076144 076150 000000 102646 102652 102656
00040: 102662 102666 000000 102672 102676 102702 102354 102354
00050: 000000 102354 076150 102456 102462 077153 000000 102725
00060: 102571 102354 102731 102354 000000 102735 102516 102522
00070: 102611 102354 000000 102354 000000 000000 000000 000000
00100: SAME: TO 000200-1
```

\*T RECORD 101 (%145, #65)
```
00000: 036000 060156 172566 000134 000000 102354 102354 102472
00010: 102476 102502 000000 102506 102354 102354 102354 102354
00020: 000000 102354 077273 077277 077303 077307 000000 077313
00030: 077317 077323 077327 077333 000000 077337 077343 102354
00040: 077273 077277 000000 077303 016310 034000 101602 077412
00050: 000000 077313 077317 077323 077327 077333 000000 077337
00060: 077343 102354 102354 102354 000000 102354 077307 102354
00070: 077317 102354 000000 077327 000000 000000 000000 000000
00100: SAME: TO 000200-1
```

\*T RECORD 102 (%146, #66)
```
00000: 036000 060156 173513 000212 000000 102354 102354 102354
```

```
00010: 102354 102354 000000 102354 102354 077412 102354 077317
00020: 000000 102354 077327 102354 102354 102354 000000 076640
00030: 076644 076650 076654 076660 000000 076664 076670 076674
00040: 102755 076704 000000 076710 076714 102456 102354 077153
00050: 000000 102354 102472 102476 102502 102506 000000 102761
00060: 102516 102522 102354 170305 000000 034000 101672 102456
00070: 102354 077153 000000 102354 000000 000000 000000 000000
00100: SAME: TO 000200-1
```

*T RECORD 103 (%147, #67)
```
00000: 036000 060156 014430 000270 000000 102472 102476 102502
00010: 102506 102735 000000 102516 102522 102354 100273 076644
00020: 000000 076650 076654 100277 076664 076670 000000 076674
00030: 102755 076704 076710 076714 000000 102354 102354 103001
00040: 103005 103011 000000 103015 103021 103025 102354 102354
00050: 000000 102354 103031 103101 103105 103111 000000 103115
00060: 103121 103125 103131 103135 000000 103141 103145 103151
00070: 103155 102456 000000 103161 000000 000000 000000 000000
00100: SAME: TO 000200-1
```

*T RECORD 104 (%150, #68)
```
00000: 036000 060156 137122 000346 000000 103165 103171 103175
00010: 103201 103205 000000 103211 070027 034000 101762 103215
00020: 000000 103221 103225 103231 103323 103327 000000 103333
00030: 102354 103337 103343 103347 000000 102354 103353 103357
00040: 103363 102354 000000 076256 076262 103406 076272 076276
00050: 000000 076302 076306 076312 076316 076322 000000 103412
00060: 103416 103436 076406 102354 000000 102354 103442 102354
00070: 102354 102354 000000 103446 000000 000000 000000 000000
00100: SAME: TO 000200-1
```

*T RECORD 105 (%151, #69)
```
00000: 036000 060156 104576 000424 000000 076446 102354 102354
00010: 076402 076406 000000 102354 076416 102354 102354 102354
00020: 000000 076436 076442 076446 102354 103460 000000 102354
00030: 102354 102354 103506 034475 000000 034000 102052 103512
00040: 102354 102354 000000 102354 102354 102354 102354 103516
00050: 000000 102354 102354 102354 102354 103536 000000 103542
00060: 103546 103552 102354 102354 000000 102354 102354 102354
00070: 102354 102354 000000 103561 000000 000000 000000 000000
00100: SAME: TO 000200-1
```

*T RECORD 106 (%152, #6A)
```
00000: 036000 060156 122731 000502 000000 102354 102354 102354
00010: 102354 102354 000000 102354 102354 076670 076767 076773
00020: 000000 076777 103570 077007 077013 077017 000000 077023
00030: 077027 077033 077037 077043 000000 076767 076773 076777
00040: 077003 077007 000000 077013 077017 077023 077027 077033
00050: 000000 077037 103577 007644 034000 102142 000000 076767
00060: 076773 076777 103570 077007 000000 077013 077017 077023
00070: 077027 077033 000000 077037 000000 000000 000000 000000
00100: SAME: TO 000200-1
```

*T RECORD 107 (%153, #6B)
```
00000: 036000 060156 100300 000560 000000 103577 077542 103647
00010: 076567 103653 000000 077562 103657 103663 103667 077327
00020: 000000 103673 076613 103677 103714 077667 000000 103720
00030: 103724 103730 103734 077347 000000 103740 103744 103750
```

78

```
00040: 103754 103760 000000 104030 104034 076567 104040 104044
00050: 000000 104050 104054 104060 104064 104070 000000 076613
00060: 104074 104133 104137 104143 000000 104147 104153 104157
00070: 104163 104167 000000 105631 000000 000000 000000 000000
00100: SAME: TO 000200-1


*T RECORD 108 (%154, #6C)
00000: 036000 060156 052215 000636 000000 034000 102232 104173
00010: 104177 104203 000000 104207 102456 104262 104266 104272
00020: 000000 104276 104302 104306 104312 104316 000000 104322
00030: 104326 104332 102354 102354 000000 102354 102354 104336
00040: 104342 104346 000000 104352 102354 102354 102354 102354
00050: 000000 104367 102354 102354 102354 104373 000000 102354
00060: 102354 102354 104377 102354 000000 102354 102354 104425
00070: 104431 102354 000000 102354 000000 000000 000000 000000
00100: SAME: TO 000200-1


*T RECORD 109 (%155, #6D)
00000: 036000 060156 106511 000714 000000 104435 104441 104445
00010: 102354 104451 000000 104455 102354 102354 046501 051513
00020: 000000 020040 041517 175371 034000 102322 000000 046117
00030: 051040 046501 051513 020040 000000 054120 051116 052040
00040: 040504 045123 000000 052040 041517 046117 051040 051105
00050: 000000 041501 046040 046101 051524 020040 000000 051105
00060: 041501 046040 020116 042507 000000 020040 000000 000000
00070: 102532 102532 000000 000024 000000 000000 000000 000000
00100: SAME: TO 000200-1


*T RECORD 110 (%156, #6E)
00000: 036000 060156 134073 000772 000000 004401 102316 102324
00010: 000025 003000 000000 102351 102351 000031 000401 102340
00020: 000000 102340 000026 000000 102346 102346 000000 000030
00030: 007401 102332 102332 041105 000000 043117 051040 040506
00040: 052105 051040 000000 145020 034000 102412 042522 040523
00050: 000000 042440 041122 052523 044040 051510 000000 040520
00060: 042440 051524 051116 043440 000000 020120 044503 045440
00070: 020040 052520 000000 020040 000000 000000 000000 000000
00100: SAME: TO 000200-1


*T RECORD 111 (%157, #6F)
00000: 036000 060156 110433 001050 000000 052110 044503 045440
00010: 047105 051523 000000 020040 020040 041440 020040 020040
00020: 000000 046440 020040 020040 054440 020040 000000 020040
00030: 041040 020040 000047 002411 000000 102404 102404 000051
00040: 000401 102415 000000 102415 000054 000401 102426 102426
00050: 000000 000064 000006 102442 102442 000164 000000 000006
00060: 102445 102445 051513 034000 000000 102502 000264 000006
00070: 102450 102450 000000 000364 000000 000000 000000 000000
00100: SAME: TO 000200-1


*T RECORD 112 (%160, #70)
00000: 036000 060156 000753 001126 000000 000006 102453 102453
00010: 000052 000000 000000 102423 102423 000050 003000 102412
00020: 000000 102412 000053 000401 102434 102434 000000 000055
00030: 007401 102332 102332 020040 000000 020040 020040 043122
00040: 047515 020040 000000 051517 052522 041440 041517 046117
00050: 000000 051040 020040 052117 020040 042111 000000 051502
00060: 046040 020123 042520 020040 000000 040514 052105 051040
```

```
00070: 020101 046114 000000 020040 000000 000000 000000 000000
00100: SAME: TO 000200-1


*T RECORD 113 (%161, #71)
00000: 036000 060156 056601 001204 000000 000032 003000 102535
00010: 102535 000034 000000 040527 034000 102572 000401 102551
00020: 000000 102551 000057 000401 102557 102557 000000 000103
00030: 000401 102540 102540 000033 000000 003000 102546 102546
00040: 000063 007401 000000 102332 102332 000056 007401 102332
00050: 000000 102332 020123 042520 020040 130122 000000 000000
00060: 102621 102621 020040 032440 000000 020040 020040 033040
00070: 020040 020040 000000 033440 000000 000000 000000 000000
00100: SAME: TO 000200-1


*T RECORD 114 (%162, #72)
00000: 036000 060156 150215 001262 000000 020040 020040 020040
00010: 034040 020040 000000 020040 130123 003000 102630 102630
00020: 000000 130124 003000 102633 102633 130125 000000 003000
00030: 102636 102636 106646 034000 000000 102662 130126 003000
00040: 102642 102642 000000 130044 003000 102442 102442 130045
00050: 000000 003000 102445 102445 130046 003000 000000 102450
00060: 102450 130047 003000 102453 000000 102453 041517 047124
00070: 020040 046117 000000 041501 000000 000000 000000 000000
00100: SAME: TO 000200-1


*T RECORD 115 (%163, #73)
00000: 036000 060156 101306 001340 000000 046040 050117 044516
00010: 052040 050117 000000 044516 052040 041517 046117 051040
00020: 000000 000073 007401 102711 102711 000103 000000 000401
00030: 102717 102717 000060 000000 000000 102706 102706 020102
00040: 046040 020040 000000 041517 046117 051040 020102 046040
00050: 000000 020040 140757 034000 102752 054120 000000 051116
00060: 052040 000000 000000 102532 000000 102532 000074 000000
00070: 102423 102423 000000 052105 000000 000000 000000 000000
00100: SAME: TO 000200-1


*T RECORD 116 (%164, #74)
00000: 036000 060156 115467 001416 000000 051040 020040 052520
00010: 042124 020040 000000 041516 051524 051040 041510 040516
00020: 000000 043440 130073 000000 102776 102776 000000 130074
00030: 003000 102773 102773 130024 000000 000000 102442 102442
00040: 130025 000000 000000 102445 102445 130026 000000 102450
00050: 000000 102450 130013 000000 102765 102765 000000 130071
00060: 000000 102770 102770 041440 000000 020053 030440 041440
00070: 025461 173337 000000 034000 000000 000000 000000 000000
00100: SAME: TO 000200-1


*T RECORD 117 (%165, #75)
00000: 036000 060156 142572 001474 000000 103042 030040 041440
00010: 020055 030440 000000 041440 026461 030040 046440 020053
00020: 000000 030440 046440 025461 030040 046440 000000 020055
00030: 030440 046440 026461 030040 000000 054440 020053 030440
00040: 054440 025461 000000 030040 054440 020055 030440 054440
00050: 000000 026461 030040 000077 000000 103040 000000 103040
00060: 000177 000000 103035 103035 000000 000277 000000 103043
00070: 103043 000377 000000 000000 000000 000000 000000 000000
00100: SAME: TO 000200-1
```

```
*T RECORD 118 (%166, #76)
00000: 036000 060156 036117 001552 000000 103046 103046 000077
00010: 000000 103054 000000 103054 000177 000000 103051 103051
00020: 000000 000277 104103 034000 103132 000000 000000 103057
00030: 103057 000377 000000 103062 000000 103062 000077 000000
00040: 103070 103070 000000 000177 000000 103065 103065 000277
00050: 000000 000000 103073 103073 000377 000000 000000 103076
00060: 103076 000000 000000 102532 000000 102532 000007 004401
00070: 102316 102324 000000 000000 000000 000000 000000 000000
00100: SAME: TO 000200-1

*T RECORD 119 (%167, #77)
00000: 036000 060156 160355 001630 000000 000000 102532 102532
00010: 000000 000000 000000 102532 102532 000000 000000 102532
00020: 000000 102532 000000 000000 102532 102532 000000 000000
00030: 000000 102532 102532 000000 000000 000000 102532 102532
00040: 000000 030771 000000 034000 103222 000000 102532 102532
00050: 000000 000000 000000 102532 102532 000000 000000 000000
00060: 102532 102532 025042 021042 000000 023440 024041 020441
00070: 024440 020040 000000 023042 000000 000000 000000 000000
00100: SAME: TO 000200-1

*T RECORD 120 (%170, #78)
00000: 036000 060156 160474 001706 000000 023440 020040 021441
00010: 024440 025042 000000 022040 020040 024041 022440 020040
00020: 000000 020054 027453 020040 027065 020467 000000 026440
00030: 020040 030053 020040 020040 000000 021467 026440 020054
00040: 030440 020040 000000 027065 022440 020040 020040 031040
00050: 000000 020040 027066 020470 026440 020040 000000 031440
00060: 020040 053016 034000 103312 000000 020040 021470 026440
00070: 020040 032040 000000 020040 000000 000000 000000 000000
00100: SAME: TO 000200-1

*T RECORD 121 (%171, #79)
00000: 036000 060156 014000 001764 000000 027066 022440 020040
00010: 000061 000401 000000 103235 103235 000061 000401 103243
00020: 000000 103243 000061 000401 103251 103251 000000 000061
00030: 000401 103257 103257 000061 000000 000401 103265 103265
00040: 000061 000401 000000 103273 103273 000061 000401 103301
00050: 000000 103301 000061 000401 103307 103307 000000 000061
00060: 000401 103315 103315 043125 000000 046114 020040 050101
00070: 043505 020040 000000 051105 000000 000000 000000 000000
00100: SAME: TO 000200-1

*T RECORD 122 (%172, #7A)
00000: 036000 060156 150363 002042 000000 051505 052040 055117
00010: 047515 070101 000000 034000 103402 020040 020111 047040
00020: 000000 020040 130014 000401 103400 103400 000000 000014
00030: 000000 103375 103375 130016 000000 000401 103367 103367
00040: 041117 052110 000000 020040 040530 044523 020040 044117
00050: 000000 051132 020040 053105 051124 020040 000000 002146
00060: 003000 103430 103430 002346 000000 007401 103422 103422
00070: 002246 003000 000000 103433 000000 000000 000000 000000
00100: SAME: TO 000200-1

*T RECORD 123 (%173, #7B)
00000: 036000 060156 127741 002120 000000 103433 042516 052122
00010: 054440 050101 000000 051115 051440 130052 007401 103452
```

```
00020:  000000 103452 052055 047516 020040 052055 000000 047506
00030:  043040 056527 034000 103472 000000 020123 042520 020040
00040:  020115 044530 000000 020040 043510 047523 052040 050101
00050:  000000 051115 051440 000043 002411 103464 000000 103464
00060:  130076 000401 103500 103500 000000 000143 007401 103472
00070:  103472 020040 000000 041440 000000 000000 000000 000000
00100:  SAME: TO 000200-1

*T RECORD 124 (%174, #7C)
00000:  036000 060156 001064 002176 000000 020040 020040 046440
00010:  020040 020040 000000 054440 020040 020040 041040 020040
00020:  000000 000071 000006 103522 103522 000171 000000 000006
00030:  103525 103525 000271 000006 000000 103530 103530 000371
00040:  000006 103533 000000 103533 047125 046502 051040 130101
00050:  000000 067776 034000 103562 000000 103556 000000 103556
00060:  047517 050123 020040 000065 000000 000000 103565 103565
00070:  042516 052105 000000 051040 000000 000000 000000 000000
00100:  SAME: TO 000200-1

*T RECORD 125 (%175, #7D)
00000:  036000 060156 137226 002254 000000 000066 000000 103574
00010:  103574 052117 000000 050040 020040 046105 043124 020040
00020:  000000 041117 052117 046440 046105 043124 000000 020040
00030:  051117 052516 042040 041505 000000 047124 051040 020124
00040:  047520 020040 000000 051111 043510 052040 041117 052117
00050:  000000 046440 051111 043510 052040 041517 000000 046117
00060:  051040 045505 054520 042040 000000 004072 007401 103603
00070:  172532 034000 000000 103652 000000 000000 000000 000000
00100:  SAME: TO 000200-1

*T RECORD 126 (%176, #7E)
00000:  036000 060156 012314 002332 000000 103603 004672 007401
00010:  103611 103611 000000 000000 000000 102532 102532 004472
00020:  000000 007401 103617 103617 130140 000401 000000 103641
00030:  103641 004272 007401 103625 000000 103625 005072 007401
00040:  103633 103633 000000 020124 044516 052040 020040 047516
00050:  000000 020040 020101 046114 020040 130102 000000 007401
00060:  103703 103703 000000 000000 000000 102532 102532 000000
00070:  000000 102532 000000 102532 000000 000000 000000 000000
00100:  SAME: TO 000200-1

*T RECORD 127 (%177, #7F)
00000:  036000 060156 104547 002410 000000 000000 000000 102532
00010:  102532 000000 000000 000000 102532 102532 000000 000000
00020:  000000 046226 034000 103742 102532 102532 000000 130105
00030:  003000 103711 103711 000000 000000 000000 102532 102532
00040:  000000 000000 000000 102532 102532 000000 000000 102532
00050:  000000 102532 041101 051505 020040 050122 000000 052103
00060:  052040 041101 051505 020040 000000 051105 041520 052040
00070:  046517 053105 000000 020040 000000 000000 000000 000000
00100:  SAME: TO 000200-1

*T RECORD 128 (%200, #80)
00000:  036000 060156 030067 002466 000000 040503 052111 053040
00010:  046517 053105 000000 020040 044516 053123 041040 046111
00020:  000000 051524 020040 041517 046122 051440 000000 041517
00030:  046122 020040 051525 041123 000000 052040 130133 007401
00040:  013167 034000 000000 104032 103764 103764 130134 007401
```

```
00050: 000000 103772 103772 130141 000401 104014 000000 104014
00060: 000000 000000 102532 102532 000000 000000 000000 102532
00070: 102532 130142 000000 000401 000000 000000 000000 000000
00100: SAME: TO 000200-1


*T RECORD 129 (%201, #81)
00000: 036000 060156 010125 002544 000000 104022 104022 130143
00010: 000000 103711 000000 103711 130135 007401 104000 104000
00020: 000000 130136 007401 104006 104006 130137 000000 000000
00030: 102765 102765 051517 052522 000000 041505 041517 046117
00040: 051040 051517 000000 052522 041505 054120 051116 052040
00050: 000000 042105 051524 027040 041517 046117 000000 051040
00060: 075202 034000 104122 042105 000000 051524 027040 054120
00070: 051116 052040 000000 020116 000000 000000 000000 000000
00100: SAME: TO 000200-1


*T RECORD 130 (%202, #82)
00000: 036000 060156 111374 002622 000000 042530 052040 000000
00010: 000000 102532 000000 102532 000000 000000 102532 102532
00020: 000000 000007 004401 104100 104106 000003 000000 004401
00030: 104114 104122 000000 000000 000000 102532 102532 000000
00040: 000000 102532 000000 102532 000000 000000 102532 102532
00050: 000000 000000 000000 102532 102532 000000 000000 000000
00060: 102532 102532 000000 000000 000000 102532 102532 000000
00070: 000000 102532 000000 102532 000000 000000 000000 000000
00100: SAME: TO 000200-1


*T RECORD 131 (%203, #83)
00000: 036000 060156 104173 002700 000000 130145 003000 104130
00010: 154320 034000 000000 104212 104130 046111 047105 020040
00020: 000000 041517 046117 051040 046111 047105 000000 020040
00030: 054120 051116 052040 050117 000000 044516 052040 052103
00040: 045516 051440 000000 051524 051116 043440 020040 020040
00050: 000000 020040 046517 042106 054440 046517 000000 052116
00060: 020040 041522 051517 051040 000000 041517 046117 051040
00070: 051505 052040 000000 020040 000000 000000 000000 000000
00100: SAME: TO 000200-1


*T RECORD 132 (%204, #84)
00000: 036000 060156 125073 002756 000000 000003 004401 104213
00010: 104221 000067 000000 000401 104227 104227 000567 003000
00020: 000000 102535 102535 000667 000401 102551 000000 102551
00030: 017401 034000 104302 000467 000000 000401 104243 104243
00040: 001467 003000 000000 104251 104251 001567 003000 102546
00050: 000000 102546 001667 000401 104235 104235 000000 001767
00060: 003000 102412 102412 002067 000000 000401 102434 102434
00070: 002167 007401 000000 104254 000000 000000 000000 000000
00100: SAME: TO 000200-1


*T RECORD 133 (%205, #85)
00000: 036000 060156 174473 003034 000000 104254 000767 000006
00010: 102442 102442 000000 001067 000006 102445 102445 001167
00020: 000000 000006 102450 102450 001267 000006 000000 102453
00030: 102453 020040 030440 020040 000000 020040 031440 020040
00040: 020040 032440 000000 020040 000167 003000 104356 042566
00050: 000000 033400 104372 104356 000267 003000 000000 104361
00060: 104361 000367 003000 104364 000000 104364 047117 044523
00070: 042440 020040 000000 030440 000000 000000 000000 000000
```

```
00100: SAME: TO 000200-1

*T RECORD 134 (%206, #86)
00000: 033400 060152 177634 003112 000000 020040 047117 044523
00010: 042440 020040 000000 031040 020040 047117 044523 042440
00020: 000000 020040 031440 020040 002267 003000 000000 102535
00030: 102535 003267 007401 104403 000000 104403 002367 003000
00040: 102546 102546 000000 001367 007401 104411 104411 002467
00050: 000000 003000 102765 102765 002567 007401 000000 102332
00060: 102332 003367 007401 104417 000000 104417 002445 000000
00070: SAME: TO 000200-1

*T RECORD 135 (%207, #87)
00000: 002000 120000 120000 000000 000000 000000 000000 000000
00010: SAME: TO 000200-1

*T RECORD 136 (%210, #88)
00000: 025000 020000 054070 077114 044502 051040 005416 000000
00010: SAME: TO 000020-1
00020: 000000 020126 042507 040440 046117 041501 046040 046111
00030: 041122 040522 054440 043125 047103 052111 047516 051440
00040: 036070 034460 030462 033056 030465 030066 037040 020040
00050: 020040 020040 000000 000000 000000 000000 000000 000000
00060: SAME: TO 000200-1

*T RECORD 137 (%211, #89)
00000: 003400 040001 054617 077114 044502 051000 000000 000000
00010: SAME: TO 000200-1

*T RECORD 138 (%212, #8A)
00000: 036000 060156 041756 000000 000000 005415 034001 002463
00010: 031460 000000 000000 000440 017030 033760 000000 006420
00020: 000000 017000 031460 002470 000040 016000 000000 031460
00030: 000000 000440 017030 033760 000000 000000 002420 017000
00040: 031460 000000 000000 000100 015000 031460 000000 000520
00050: 000000 015030 031460 000000 000100 015040 000000 033760
00060: 000000 000500 017000 031460 000000 002500 114040 005000
00070: 043560 077777 000000 000440 000000 000000 000000 000000
00100: SAME: TO 000200-1

*T RECORD 139 (%213, #8B)
00000: 036000 060156 027116 000056 000000 017000 001560 104461
00010: 000440 017340 000000 033760 000000 000500 017000 031460
00020: 000000 002507 054040 005000 056332 034001 000000 002501
00030: 041560 000036 001040 017035 000000 033760 000000 046501
00040: 017000 047560 000000 074000 000442 017002 047560 003740
00050: 000000 000443 017002 031460 000000 000040 000000 011000
00060: 031460 002511 000040 016000 000000 031460 000000 000040
00070: 011000 031760 000000 000000 000000 000000 000000 000000
00100: SAME: TO 000200-1

*T RECORD 140 (%214, #8C)
00000: 036000 060156 145410 000134 000000 003400 017010 031460
00010: 000000 000040 000000 011000 031760 000000 000400 011300
00020: 000000 033760 000000 000400 007000 031460 000000 000000
00030: 000440 017300 031460 000000 000000 000120 015000 033760
00040: 000000 000500 000000 017000 066447 034001 002517 001560
00050: 000000 104534 000440 017340 101760 135023 000000 000440
```

84

```
00060:  017360  031460  000000  000040  000000  011000  033760  000000
00070:  000400  007000  000000  033760  000000  000000  000000  000000
00100:  SAME: TO 000200-1


*T RECORD 141 (%215,  #8D)
00000:  036000  060156  144712  000212  000000  000003  000445  017000
00010:  031460  005336  000000  000040  006000  001660  024570  000440
00020:  000000  017300  031760  000001  000440  017070  000000  001565
00030:  010040  000440  017170  031760  000000  001000  000440  017170
00040:  031760  000000  000000  000440  017170  031760  000400  000440
00050:  000000  017170  031460  000000  000040  037150  000000  031760
00060:  001002  000440  017340  153164  000000  034001  002535  031562
00070:  000000  000500  000000  017070  000000  000000  000000  000000
00100:  SAME: TO 000200-1


*T RECORD 142 (%216,  #8E)
00000:  036000  060156  065771  000270  000000  031460  000000  000040
00010:  037170  031460  000000  000000  000040  017040  041562  000000
00020:  000000  000500  017000  031460  002537  120040  000000  005000
00030:  013465  000000  000445  017000  000000  031460  002524  114040
00040:  005000  031460  000000  000000  000040  007000  033760  001000
00050:  000000  000441  017000  043260  000000  000442  000000  017000
00060:  033460  000000  000456  017340  000000  043260  000000  000453
00070:  017000  031760  000000  000000  000000  000000  000000  000000
00100:  SAME: TO 000200-1


*T RECORD 143 (%217,  #8F)
00000:  036000  060156  173000  000346  000000  000500  017000  033461
00010:  002555  020454  000000  005000  165044  034001  002553  033461
00020:  000000  000000  000453  017000  043260  000000  000000  000454
00030:  017000  033760  000005  000455  000000  017000  033760  000600
00040:  000441  017000  000000  103476  000000  000456  017340  031760
00050:  000000  000000  000500  017000  013475  000000  000000  020455
00060:  007000  013462  000000  014457  000000  007000  033760  000140
00070:  000440  017000  000000  121560  000000  000000  000000  000000
00100:  SAME: TO 000200-1


*T RECORD 144 (%220,  #90)
00000:  036000  060156  163607  000424  000000  000000  000500  017000
00010:  031460  002570  000000  120040  005000  031460  003443  000040
00020:  000000  006000  031460  002557  000040  016000  000000  031760
00030:  110262  000440  017360  066551  000000  034001  002571  103477
00040:  000000  000457  000000  017000  121177  000000  000441  017000
00050:  000000  031460  002557  140040  005000  031760  000000  110265
00060:  000440  017300  001177  000000  000000  000453  017070  033760
00070:  110262  000440  000000  017100  000000  000000  000000  000000
00100:  SAME: TO 000200-1


*T RECORD 145 (%221,  #91)
00000:  036000  060156  175556  000502  000000  041260  025200  000440
00010:  006170  031760  000000  110265  000440  017300  001177  000000
00020:  000000  000454  017070  033760  110262  000440  000000  017100
00030:  031760  100000  000440  017170  000000  031460  025200  000040
00040:  006000  031460  000000  002571  000040  016000  031760  144742
00050:  000000  000440  017340  073724  034001  002607  000000  111562
00060:  000600  000440  017000  031460  000000  002612  120040  005000
00070:  031461  000000  000000  000440  000000  000000  000000  000000
00100:  SAME: TO 000200-1
```

85

```
*T RECORD 146 (%222, #92)
00000: 036000 060156 056034 000560 000000 007070 035462 000005
00010: 000642 017002 000000 111562 000000 000500 017000 031760
00020: 000000 000000 020500 007000 033462 002611 000000 020441
00030: 005000 031460 030625 000040 000000 006000 031460 000000
00040: 000040 007000 000000 031460 000000 000440 017030 031472
00050: 000000 000000 000500 015030 031460 000000 000000 000100
00060: 015000 031460 003672 000040 000000 006000 031460 002463
00070: 000440 006300 000000 162601 000000 000000 000000 000000
00100: SAME: TO 000200-1

*T RECORD 147 (%223, #93)
00000: 036000 060156 064537 000636 000000 034001 002625 031760
00010: 002041 000440 000000 017030 001563 000022 014440 017760
00020: 000000 031460 000000 014040 017560 001563 000000 070000
00030: 002440 017034 033760 000000 000000 000505 017000 033760
00040: 004000 000444 000000 017000 001164 000000 000445 017030
00050: 000000 121563 000400 000440 017000 031460 000000 002641
00060: 040040 005000 115563 000100 000000 000445 017000 035565
00070: 000200 000445 000000 017000 000000 000000 000000 000000
00100: SAME: TO 000200-1

*T RECORD 148 (%224, #94)
00000: 036000 060156 041011 000714 000000 001165 000000 000444
00010: 017030 101760 000000 043000 014440 017760 001560 000001
00020: 000000 000440 017340 013564 034001 002643 000000 033760
00030: 000000 000504 017140 003562 000000 000000 000502 017140
00040: 033760 000000 000000 000511 017140 033760 000000 000505
00050: 000000 017140 033760 000000 146100 017000 000000 031460
00060: 000000 015040 017000 031460 000000 000000 000440 017340
00070: 030760 000377 000000 000440 000000 000000 000000 000000
00100: SAME: TO 000200-1

*T RECORD 149 (%225, #95)
00000: 036000 060156 146220 000772 000000 017000 031460 002655
00010: 050040 005000 000000 031760 000000 002500 017034 040660
00020: 000000 000000 151500 017000 031460 002742 000000 020040
00030: 005000 001164 000000 000441 000000 017030 033760 000000
00040: 000506 017000 000000 057606 034001 002661 001563 000004
00050: 000000 014440 017760 031760 000007 014440 000000 017570
00060: 031462 000000 014440 017570 000000 031760 000014 014440
00070: 017570 031760 000000 000076 000000 000000 000000 000000
00100: SAME: TO 000200-1

*T RECORD 150 (%226, #96)
00000: 036000 060156 174045 001050 000000 000440 017300 031463
00010: 000000 000440 000000 017070 031760 000022 000440 017030
00020: 000000 101760 043400 014440 017760 041260 000000 000000
00030: 000440 017030 031760 041401 000000 014440 017760 021740
00040: 000000 154500 000000 017030 031760 040000 014440 017760
00050: 000000 001563 000032 000440 017760 031760 000000 000003
00060: 000440 017300 153611 034001 000000 002677 037260 000000
00070: 000447 017002 000000 003067 000000 000000 000000 000000
00100: SAME: TO 000200-1

*T RECORD 151 (%227, #97)
00000: 036000 060156 121715 001126 000000 000000 000447 017000
```

86

```
00010: 021760 000000 000000 000520 017300 031460 002700 140040
00020: 000000 005000 003567 104540 000447 017000 000000 033760
00030: 000005 000450 017000 031760 000000 000076 000440 017340
00040: 031760 000000 000000 000500 017000 031460 002706 120040
00050: 000000 005040 031760 000002 000440 017030 000000 101760
00060: 043400 014440 017760 041260 000000 000000 000440 017030
00070: 031760 041401 000000 014440 000000 000000 000000 000000
00100: SAME: TO 000200-1

*T RECORD 152 (%230, #98)
00000: 036000 060156 145446 001204 000000 017760 001720 177777
00010: 000440 017030 000000 166717 034001 002715 031760 040000
00020: 000000 014440 017760 031462 000000 000440 000000 017030
00030: 001563 000006 014440 017760 000000 100760 000000 000500
00040: 017000 103466 000000 000000 000446 017030 001563 000004
00050: 000000 014440 017760 031467 000000 000440 000000 017340
00060: 031760 000007 000440 017300 000000 033760 000000 000512
00070: 017000 035472 000000 000000 000000 000000 000000 000000
00100: SAME: TO 000200-1

*T RECORD 153 (%231, #99)
00000: 036000 060156 156064 001262 000000 000452 017002 031260
00010: 002731 130440 000000 005030 001563 000056 014440 017760
00020: 000000 021760 000000 000520 017300 100260 000000 002726
00030: 140440 005000 162261 034001 000000 002733 110660 000007
00040: 000440 017000 000000 013470 000000 000450 017000 103467
00050: 000000 002721 140447 005000 003564 000007 000000 000444
00060: 017000 013471 000000 000451 000000 017000 002651 002742
00070: 040041 001000 000000 103460 000000 000000 000000 000000
00100: SAME: TO 000200-1

*T RECORD 154 (%232, #9A)
00000: 036000 060156 102216 001340 000000 002651 000440 016000
00010: 031460 000000 000000 000040 011000 033760 000000 000412
00020: 000000 011000 033760 000000 000400 007000 000000 031460
00030: 025732 000040 006000 043260 000000 000000 000456 017000
00040: 031460 002463 000000 000440 006300 031460 002764 154040
00050: 000000 005140 122020 034001 002751 031460 000000 002466
00060: 000040 006000 033760 000000 000000 000517 017000 047577
00070: 003740 000456 000000 017002 000000 000000 000000 000000
00100: SAME: TO 000200-1

*T RECORD 155 (%233, #9B)
00000: 036000 060156 054260 001416 000000 045577 000036 000455
00010: 017002 065575 000000 000017 000455 017002 111575 000004
00020: 000000 000440 017000 011455 000000 122440 000000 017036
00030: 041577 004000 000440 017000 000000 033760 002763 020515
00040: 005000 003575 000000 000400 000455 017000 031460 000000
00050: 000000 000040 017140 033760 000000 000504 000000 017140
00060: 033760 000000 000505 017140 000000 033760 000000 000506
00070: 017140 165270 000000 034001 000000 000000 000000 000000
00100: SAME: TO 000200-1

*T RECORD 156 (%234, #9C)
00000: 036000 060156 006120 001474 000000 002767 033760 000000
00010: 000507 017000 000000 041563 007400 002440 017034 031460
00020: 000000 002773 154040 005000 041576 007400 000000 002440
00030: 017034 033760 000000 000510 000000 017000 033570 004000
```

```
00040: 000450 017000 000000 121563 000400 001440 017000 031460
00050: 000000 003002 040040 005000 111563 000200 000000 000440
00060: 017000 031460 003005 020040 000000 005000 003003 003004
00070: 015040 001000 000000 003570 000000 000000 000000 000000
00100: SAME: TO 000200-1

*T RECORD 157 (%235, #9D)
00000: 036000 060156 037315 001552 000000 000020 000450 017000
00010: 003570 000020 000000 000450 017000 003570 000020 000450
00020: 000000 017000 012476 034001 003005 003570 000000 000100
00030: 000450 017000 007700 000010 000000 000451 017000 031460
00040: 003012 154040 000000 005000 033571 000010 000451 017000
00050: 000000 033175 000000 000451 017000 031460 000000 003672
00060: 000040 006000 031760 007733 000000 000440 017760 031163
00070: 000000 000456 000000 017030 000000 000000 000000 000000
00100: SAME: TO 000200-1

*T RECORD 158 (%236, #9E)
00000: 036000 060156 066566 001630 000000 031760 000076 000440
00010: 017360 031760 000000 002041 000440 017030 001563 000022
00020: 000000 014440 017760 031460 000000 014040 000000 017560
00030: 031460 003025 154040 005000 000000 031760 000041 000440
00040: 017030 161250 000000 034001 003023 001576 000022 014440
00050: 000000 017760 003176 000000 014443 017560 000000 001563
00060: 000004 000440 017700 001164 000000 000000 014441 017470
00070: 031465 000000 000000 014440 000000 000000 000000 000000
00100: SAME: TO 000200-1

*T RECORD 159 (%237, #9F)
00000: 036000 060156 021433 001706 000000 017570 001166 000000
00010: 014442 017570 000000 031467 000000 014440 017570 031460
00020: 000000 003035 154040 005000 001576 000006 000000 000440
00030: 017700 031466 000000 014440 000000 017470 001563 000032
00040: 000440 017760 000000 031760 043000 000440 017700 031470
00050: 000000 000000 014440 017470 031760 043400 000000 000440
00060: 017700 062700 034001 003041 000000 031471 000000 014440
00070: 017470 031760 000000 041401 000000 000000 000000 000000
00100: SAME: TO 000200-1

*T RECORD 160 (%240, #A0)
00000: 036000 060156 117524 001764 000000 000440 017700 041260
00010: 000000 014440 000000 017470 001520 000004 000440 017300
00020: 000000 031460 003137 000040 006000 031460 000000 025763
00030: 000040 006000 031460 000000 000000 000040 007000 031460
00040: 000223 000040 000000 006000 033760 134204 000444 017000
00050: 000000 001564 000022 000440 017340 033760 000000 000000
00060: 000504 017140 003564 000000 000000 000503 017000 101460
00070: 003070 000440 000000 006700 000000 000000 000000 000000
00100: SAME: TO 000200-1

*T RECORD 161 (%241, #A1)
00000: 036000 060156 151620 002042 000000 031460 003065 050040
00010: 005000 133432 000000 034001 003057 033760 134251 000444
00020: 000000 017000 001564 000022 000440 017340 000000 033760
00030: 000000 000504 017140 003564 000000 000000 000503 017000
00040: 001560 000003 000000 000440 017700 031460 003070 000040
00050: 000000 006000 031460 002745 150040 006000 000000 031460
00060: 000243 000040 006000 031460 000000 000000 000040 007000
```

88

```
00070: 031460 000000 000000 000440 000000 000000 000000 000000
00100: SAME: TO 000200-1
```

*T RECORD 162 (%242, #A2)
```
00000: 036000 060156 047742 002120 000000 017030 031460 000000
00010: 000100 015000 000000 101760 000000 000540 017340 033760
00020: 000000 000000 000500 017240 033760 000000 000000 005501
00030: 017000 132431 034001 003075 000000 003560 000000 000502
00040: 017000 121162 000000 000000 000444 017000 121161 003110
00050: 000000 014444 005000 031460 003104 114040 000000 005000
00060: 101760 000000 000540 017300 000000 121162 000000 000444
00070: 017070 031464 000000 003111 000000 000000 000000 000000
00100: SAME: TO 000200-1
```

*T RECORD 163 (%243, #A3)
```
00000: 036000 060156 165277 002176 000000 000440 016270 121163
00010: 000000 000441 000000 017000 121163 003110 014442 005000
00020: 000000 101760 003111 114540 005300 121163 000000 003111
00030: 000441 016070 031460 000000 000000 001040 017000 031460
00040: 000000 000040 000000 011000 033760 000000 000400 007000
00050: 000000 132230 034001 003113 031460 003672 000000 000040
00060: 006000 031460 002463 000440 000000 006300 031463 000000
00070: 000440 017030 000000 031760 000000 000000 000000 000000
00100: SAME: TO 000200-1
```

*T RECORD 164 (%244, #A4)
```
00000: 036000 060156 104147 002254 000000 000076 000440 017360
00010: 031760 002041 000000 000440 017030 001563 000022 014440
00020: 000000 017760 033760 004000 014444 017560 000000 031463
00030: 000000 002440 017034 003564 000000 000000 000504 017000
00040: 121563 000400 000000 001440 017000 031460 003132 040040
00050: 000000 005000 111563 000200 000440 017000 000000 031460
00060: 003135 020040 005000 031460 000000 003134 014040 005000
00070: 077563 034001 000000 003131 000000 000000 000000 000000
00100: SAME: TO 000200-1
```

*T RECORD 165 (%245, #A5)
```
00000: 036000 060156 027776 002332 000000 003133 003133 005040
00010: 001000 003564 000000 000020 000444 017000 003564 000020
00020: 000000 000444 017000 003564 000020 000444 000000 017000
00030: 001564 000100 000440 017030 000000 031460 000000 000040
00040: 007000 031760 000000 040000 000440 017700 031460 000000
00050: 000000 151040 017140 031760 000000 002500 000000 017034
00060: 033760 000000 000504 017140 000000 031564 000000 014500
00070: 017470 003140 000000 000000 000000 000000 000000 000000
00100: SAME: TO 000200-1
```

*T RECORD 166 (%246, #A6)
```
00000: 036000 060156 117241 002410 000000 150040 003000 031460
00010: 003113 000040 000000 006000 031760 043001 014440 017760
00020: 000000 117713 034001 003147 001700 000000 000000 000440
00030: 017030 001700 000000 000500 000000 017030 031760 043400
00040: 014440 017760 000000 041260 000000 000440 017030 031760
00050: 000000 041401 014440 017760 033461 000000 000000 000456
00060: 017000 033462 000000 000457 000000 017000 030463 000000
00070: 000440 017000 000000 101460 000000 000000 000000 000000
00100: SAME: TO 000200-1
```

```
*T RECORD 167 (%247, #A7)
00000: 036000 060156 054244 002466 000000 000000 000440 017340
00010: 033760 000000 000000 000500 017140 033760 000000 000501
00020: 000000 017140 033760 000000 000502 017140 000000 033760
00030: 003137 000503 006000 033462 000000 000000 000444 017000
00040: 055476 034001 000000 003165 113160 000000 000444 017000
00050: 000000 043260 003171 040452 005000 003572 000000 000004
00060: 000452 017000 031460 003172 000000 000040 016000 123464
00070: 000000 000444 000000 017000 000000 000000 000000 000000
00100: SAME: TO 000200-1

*T RECORD 168 (%250, #A8)
00000: 036000 060156 156166 002544 000000 033463 000000 000445
00010: 017000 113161 000000 000000 000445 017000 031460 003177
00020: 000000 040040 005000 003572 000002 000452 000000 017000
00030: 031460 003200 000040 016000 000000 123465 000000 000445
00040: 017000 121165 000000 000000 000444 017000 023552 000007
00050: 000000 040452 017000 043572 000001 000451 000000 017000
00060: 014213 034001 003203 031460 000000 003206 021040 005000
00070: 033464 000000 000000 000446 000000 000000 000000 000000
00100: SAME: TO 000200-1

*T RECORD 169 (%251, #A9)
00000: 036000 060156 046434 002622 000000 017000 033465 003210
00010: 000447 016000 000000 033465 000000 000446 017000 033464
00020: 000000 000000 000447 017000 037467 000000 000000 151450
00030: 017002 113166 000000 000450 000000 017000 121162 000000
00040: 000440 017000 000000 121163 003215 120441 005000 031460
00050: 000000 003243 020040 005000 003572 110377 000000 000453
00060: 017340 041570 010000 000440 000000 017000 003222 003223
00070: 022041 001000 000000 001573 000000 000000 000000 000000
00100: SAME: TO 000200-1

*T RECORD 170 (%252, #AA)
00000: 036000 060156 157177 002700 000000 000010 000440 017340
00010: 125727 034001 000000 003221 003561 003227 000501 016000
00020: 000000 003560 003227 000500 016000 003560 000000 000000
00030: 000500 017000 001573 000010 000000 000440 017340 003561
00040: 000000 000501 000000 017000 113166 000000 000650 017000
00050: 000000 003167 000000 000650 017000 031460 000000 000000
00060: 000440 017030 111560 001000 000000 016440 017000 003212
00070: 003212 114042 000000 001000 000000 000000 000000 000000
00100: SAME: TO 000200-1

*T RECORD 171 (%253, #AB)
00000: 036000 060156 107526 002756 000000 031160 000000 000456
00010: 017030 001660 000000 000014 014440 017760 031461 000000
00020: 000000 000440 017030 111561 000600 016440 000000 017000
00030: 022555 034001 003237 003212 000000 003212 140042 001000
00040: 031161 000000 000000 000457 017030 001660 000056 014440
00050: 000000 017760 031460 003212 000040 016000 000000 031760
00060: 000076 000440 017300 041260 000000 000000 000440 007070
00070: 033760 100413 000000 000452 000000 000000 000000 000000
00100: SAME: TO 000200-1

*T RECORD 172 (%254, #AC)
00000: 036000 060156 153563 003034 000000 017000 031460 003265
00010: 000040 006000 000000 031460 003263 050040 005000 033760
```

90

```
00020: 000000 100422 000452 017000 033466 003265 000000 000447
00030: 006000 031460 003263 050040 000000 005000 033760 100413
00040: 000452 017000 000000 001572 000002 000440 017340 142572
00050: 000000 034001 003255 030474 000000 000440 000000 017000
00060: 033760 003435 000500 006000 000000 001572 000004 000440
00070: 017340 000660 000000 000000 000000 000000 000000 000000
00100: SAME: TO 000200-1

*T RECORD 173 (%255, #AD)
00000: 036000 060156 064706 003112 000000 000500 017000 001660
00010: 100431 000440 000000 017340 030760 000000 000500 007000
00020: 000000 020760 000000 000440 017000 031460 000000 000000
00030: 000040 007000 001572 000000 000000 005440 017340 033760
00040: 000000 000511 000000 017000 033760 000000 000500 017140
00050: 000000 120560 000000 000500 017140 043260 000000 000000
00060: 000440 017000 033760 000000 000000 000503 017000 125163
00070: 034001 003273 000000 033760 000000 000000 000000 000000
00100: SAME: TO 000200-1

*T RECORD 174 (%256, #AE)
00000: 036000 060156 016507 003170 000000 003325 000501 006000
00010: 035760 000000 000000 000513 017002 121160 000000 000453
00020: 000000 017000 003441 000000 114453 017140 000000 121167
00030: 000000 000451 017030 031460 000000 003324 040040 005000
00040: 030760 000000 000000 000500 017000 033473 000000 000441
00050: 000000 017030 001572 000005 000440 017360 000000 043260
00060: 003325 000440 006000 033461 000000 000000 000454 017030
00070: 001572 000004 000000 000440 000000 000000 000000 000000
00100: SAME: TO 000200-1

*T RECORD 175 (%257, #AF)
00000: 036000 060156 047445 003246 000000 017360 121163 000000
00010: 000441 017000 000000 031460 003324 040040 005000 054664
00020: 000000 034001 003311 033473 000000 000440 000000 017000
00030: 030474 003435 000440 006000 000000 003071 000000 000451
00040: 017000 001572 000000 000003 005440 017340 033760 000000
00050: 000000 000510 017000 003571 000000 000511 000000 017000
00060: 003171 000000 000453 017000 000000 113170 000000 000653
00070: 017000 121167 000000 000000 000000 000000 000000 000000
00100: SAME: TO 000200-1

*T RECORD 176 (%260, #B0)
00000: 036000 060156 115512 003324 000000 000451 017000 121173
00010: 003324 040447 000000 005000 031460 000000 140040 007000
00020: 000000 031460 000000 001040 007000 111561 000000 100000
00030: 000440 017000 031460 003356 000000 020040 005000 160302
00040: 034001 003327 000000 031461 000000 006440 017000 031460
00050: 000000 003333 140040 005000 031460 003357 000000 020040
00060: 005000 123461 000000 002441 000000 017000 033760 000021
00070: 005442 017000 000000 031460 000000 000000 000000 000000
00100: SAME: TO 000200-1

*T RECORD 177 (%261, #B1)
00000: 036000 060156 121456 003402 000000 000000 000440 017000
00010: 031460 003344 000000 014040 005000 121160 000000 000441
00020: 000000 017000 031460 003341 014040 005000 000000 116161
00030: 003342 001440 016003 036460 000000 000000 005440 017003
00040: 013462 000000 000000 000442 017000 003353 003336 120040
```

```
00050: 000000 001000 031460 000000 156040 017000 000000 000643
00060: 034001 003345 001160 000000 000000 000441 017000 031460
00070: 003350 140040 000000 005000 000000 000000 000000 000000
00100: SAME: TO 000200-1

*T RECORD 178 (%262, #B2)
00000: 036000 060156 162551 003460 000000 006161 003351 001440
00010: 016003 036460 000000 000000 005440 017003 013462 000000
00020: 000000 000442 017000 003353 003345 120040 000000 001000
00030: 037200 000000 000441 017002 000000 035460 000000 154440
00040: 007002 123461 000000 000000 000441 007000 043260 000000
00050: 000000 000441 007000 033760 077777 000441 000000 017000
00060: 101760 077777 000440 017000 000000 031460 000000 000040
00070: 007000 033460 000000 000000 000000 000000 000000 000000
00100: SAME: TO 000200-1

*T RECORD 179 (%263, #B3)
00000: 036000 060156 146325 003536 000000 000452 017000 144643
00010: 034001 003363 000000 001572 000000 000440 017340 033760
00020: 000000 000000 000500 017140 033760 000000 000000 000501
00030: 017140 033760 000000 000505 000000 017140 033760 000000
00040: 000506 017140 000000 033760 000000 000502 017140 033760
00050: 000000 000000 000503 017140 033760 000000 000000 000507
00060: 017140 033760 000000 000510 000000 017000 031460 003411
00070: 000040 006000 000000 013465 000000 000000 000000 000000
00100: SAME: TO 000200-1

*T RECORD 180 (%264, #B4)
00000: 036000 060156 137151 003614 000000 000000 000445 017000
00010: 031460 003401 000000 020040 005000 003166 000000 000440
00020: 000000 017000 003166 003374 000441 016000 000000 013732
00030: 034001 003401 013467 000000 000000 000447 017000 031460
00040: 003410 020040 000000 005000 001572 000002 000440 017340
00050: 000000 033760 000000 000505 017000 123466 000000 000000
00060: 000446 017000 003170 000000 000000 000442 017000 003170
00070: 003374 000443 000000 016000 000000 000000 000000 000000
00100: SAME: TO 000200-1

*T RECORD 181 (%265, #B5)
00000: 036000 060156 127061 003672 000000 031460 000000 000040
00010: 007000 031760 000000 105740 000440 017300 031760 100004
00020: 000000 000440 017070 103460 000000 000453 000000 017170
00030: 021161 000000 000440 017170 000000 031462 000000 000440
00040: 017170 101760 000000 000000 000440 017170 003157 034001
00050: 000000 003417 021760 000000 000440 017170 000000 033760
00060: 105740 000440 017160 031460 000000 002745 000040 006000
00070: 031760 105743 000000 000440 000000 000000 000000 000000
00100: SAME: TO 000200-1

*T RECORD 182 (%266, #B6)
00000: 036000 060156 172667 003750 000000 017300 031463 002745
00010: 000440 006070 000000 031760 105741 000440 017300 011473
00020: 000000 000000 000440 017070 101760 000000 000000 000440
00030: 017170 101462 000000 000440 000000 017170 121163 000000
00040: 000442 017030 000000 021760 002745 000500 006170 031760
00050: 000000 105741 000440 017300 031461 002745 000000 000440
00060: 006070 013473 000000 000440 000000 007000 033631 014001
00070: 003435 031460 000000 000000 000000 000000 000000 000000
```

```
00100: SAME: TO 000200-1

*T RECORD 183 (%267, #B7)
00000: 036000 060156 100662 004026 000000 000040 037150 063161
00010: 050000 000441 000000 017001 004160 000015 000641 017003
00020: 000000 114160 000000 000441 017003 031460 000000 050000
00030: 004040 017001 031460 000000 000000 000040 027170 034466
00040: 034000 104461 000000 070234 070232 065026 065032 072032
00050: 000000 065016 070226 070216 070434 070432 000000 070426
00060: 070416 070230 070430 000041 000000 000140 001600 000101
00070: 000040 000100 000000 000200 000000 000000 000000 000000
00100: SAME: TO 000200-1

*T RECORD 184 (%270, #B8)
00000: 036000 060156 027666 004104 000000 000400 001000 002000
00010: 072022 011000 000000 072020 072030 072034 000001 000002
00020: 000000 000004 000010 000020 000040 000100 000000 000200
00030: 040000 000004 000060 000300 000000 037476 037716 000012
00040: 000024 000100 000000 000120 000177 000101 000101 000101
00050: 000000 000177 000177 000001 000001 000001 000000 053125
00060: 034000 104551 000001 000100 000000 000100 000177 000100
00070: 000100 000100 000000 000100 000000 000000 000000 000000
00100: SAME: TO 000200-1

*T RECORD 185 (%271, #B9)
00000: 036000 060156 071571 004162 000000 000100 000100 000177
00010: 000003 000004 000000 000076 000020 000140 000177 000125
00020: 000000 000111 000125 000177 000060 000100 000000 000060
00030: 000014 000003 000160 000110 000000 000110 000110 000160
00040: 000007 000003 000000 000005 000030 000140 000111 000111
00050: 000000 000052 000034 000010 000111 000111 000000 000111
00060: 000111 000111 000017 000060 000000 000177 000060 000017
00070: 000026 000050 000000 000176 000000 000000 000000 000000
00100: SAME: TO 000200-1

*T RECORD 186 (%272, #BA)
00000: 036000 060156 146164 004240 000000 000050 000026 113100
00010: 034000 104641 000000 000010 000034 000052 000111 000111
00020: 000000 000076 000125 000111 000125 000076 000000 000076
00030: 000101 000111 000101 000076 000000 000177 000111 000111
00040: 000111 000177 000000 000076 000101 000117 000111 000076
00050: 000000 000076 000101 000171 000111 000076 000000 000076
00060: 000111 000171 000101 000076 000000 000076 000111 000117
00070: 000101 000076 000000 000060 000000 000000 000000 000000
00100: SAME: TO 000200-1

*T RECORD 187 (%273, #BB)
00000: 036000 060156 146425 004316 000000 000100 000070 000014
00010: 000013 000100 000000 000177 000001 000177 000100 000010
00020: 000000 000010 000010 000010 000177 000143 000000 113770
00030: 034000 104731 000125 000111 000000 000125 000143 000000
00040: 000010 000177 000000 000010 000000 000006 000011 000121
00050: 000000 000001 000002 000076 000111 000111 000000 000111
00060: 000076 000177 000111 000117 000000 000101 000177 000177
00070: 000111 000171 000000 000101 000000 000000 000000 000000
00100: SAME: TO 000200-1

*T RECORD 188 (%274, #BC)
```

```
00000: 036000 060156 145041 004374 000000 000171 000177 000101
00010: 000171 000111 000000 000177 000177 000101 000117 000111
00020: 000000 000177 000000 000000 000000 000000 000000 000000
00030: 000000 000000 000137 000000 000000 000000 000000 000007
00040: 000000 000007 000000 000000 000024 000177 113042 034000
00050: 000000 105021 000024 000177 000024 000044 000000 000052
00060: 000177 000052 000022 000043 000000 000023 000010 000144
00070: 000142 000066 000000 000111 000000 000000 000000 000000
00100: SAME: TO 000200-1


*T RECORD 189 (%275, #BD)
00000: 036000 060156 140375 004452 000000 000126 000040 000120
00010: 000000 000000 000000 000007 000000 000000 000034 000042
00020: 000000 000101 000000 000000 000000 000000 000000 000101
00030: 000042 000034 000042 000024 000000 000177 000024 000042
00040: 000010 000010 000000 000076 000010 000010 000000 000100
00050: 000000 000060 000000 000000 000010 000010 000000 000010
00060: 000010 000010 000000 000000 000000 000100 110460 034000
00070: 105111 000000 000000 000000 000000 000000 000000 000000
00100: SAME: TO 000200-1


*T RECORD 190 (%276, #BE)
00000: 036000 060156 071434 004530 000000 000040 000020 000010
00010: 000004 000002 000000 000076 000121 000111 000105 000076
00020: 000000 000000 000102 000177 000100 000000 000000 000162
00030: 000111 000111 000111 000106 000000 000041 000101 000111
00040: 000115 000063 000000 000030 000024 000022 000177 000020
00050: 000000 000047 000105 000105 000105 000071 000000 000074
00060: 000112 000111 000111 000061 000000 000101 000041 000021
00070: 000011 000007 000000 000066 000000 000000 000000 000000
00100: SAME: TO 000200-1


*T RECORD 191 (%277, #BF)
00000: 036000 060156 143740 004606 000000 000111 000111 000111
00010: 000066 000106 000000 000111 000111 000051 112661 034000
00020: 000000 105201 000036 000000 000000 000024 000000 000000
00030: 000000 000000 000100 000064 000000 000000 000000 000010
00040: 000024 000042 000000 000101 000000 000024 000024 000024
00050: 000000 000024 000024 000000 000101 000042 000000 000024
00060: 000010 000002 000001 000131 000000 000011 000006 000076
00070: 000101 000135 000000 000131 000000 000000 000000 000000
00100: SAME: TO 000200-1


*T RECORD 192 (%300, #C0)
00000: 036000 060156 145560 004664 000000 000116 000174 000022
00010: 000021 000022 000000 000174 000177 000111 000111 000111
00020: 000000 000066 000076 000101 000101 000101 000000 000042
00030: 000177 000101 000101 000101 000000 000076 111727 034000
00040: 105271 000177 000000 000111 000111 000111 000101 000177
00050: 000000 000011 000011 000011 000001 000076 000000 000101
00060: 000101 000121 000162 000177 000000 000010 000010 000010
00070: 000177 000000 000000 000101 000000 000000 000000 000000
00100: SAME: TO 000200-1


*T RECORD 193 (%301, #C1)
00000: 036000 060156 147436 004742 000000 000177 000101 000000
00010: 000040 000100 000000 000100 000100 000077 000177 000010
00020: 000000 000024 000042 000101 000177 000100 000000 000100
```

```
00030: 000100 000100 000177 000002 000000 000034 000002 000177
00040: 000177 000004 000000 000010 000020 000177 000076 000101
00050: 000000 000101 000101 000076 000177 114033 000000 034000
00060: 105361 000011 000011 000011 000000 000006 000076 000101
00070: 000121 000041 000000 000136 000000 000000 000000 000000
00100: SAME: TO 000200-1

*T RECORD 194 (%302, #C2)
00000: 036000 060156 071730 005020 000000 000177 000011 000031
00010: 000051 000106 000000 000046 000111 000111 000111 000062
00020: 000000 000003 000001 000177 000001 000003 000000 000077
00030: 000100 000100 000100 000077 000000 000007 000030 000140
00040: 000030 000007 000000 000077 000100 000070 000100 000077
00050: 000000 000143 000024 000010 000024 000143 000000 000003
00060: 000004 000170 000004 000003 000000 000141 000121 000111
00070: 000105 000103 000000 000177 000000 000000 000000 000000
00100: SAME: TO 000200-1

*T RECORD 195 (%303, #C3)
00000: 036000 060156 146341 005076 000000 000177 113072 034000
00010: 105451 000101 000000 000101 000101 000002 000004 000010
00020: 000000 000020 000040 000101 000101 000101 000000 000177
00030: 000177 000020 000010 000010 000000 000010 000020 000100
00040: 000100 000100 000000 000100 000100 000000 000001 000002
00050: 000000 000004 000000 000040 000124 000124 000000 000124
00060: 000170 000177 000101 000101 000000 000101 000070 000070
00070: 000104 000104 000000 000104 000000 000000 000000 000000
00100: SAME: TO 000200-1

*T RECORD 196 (%304, #C4)
00000: 036000 060156 147017 005154 000000 000104 000070 000104
00010: 000104 000104 000000 000177 000070 000124 000124 000124
00020: 000000 000030 000000 000010 000176 113425 000000 034000
00030: 105541 000011 000000 000010 000000 000124 000124 000124
00040: 000074 000177 000000 000004 000004 000004 000170 000000
00050: 000000 000104 000175 000100 000000 000040 000000 000100
00060: 000075 000000 000000 000000 000000 000177 000020 000050
00070: 000104 000000 000000 000101 000000 000000 000000 000000
00100: SAME: TO 000200-1

*T RECORD 197 (%305, #C5)
00000: 036000 060156 146404 005232 000000 000177 000100 000000
00010: 000174 000004 000000 000170 000004 000170 000174 000004
00020: 000000 000004 000004 000170 000070 000104 000000 000104
00030: 000104 000070 000174 000024 000000 000024 000024 000010
00040: 000010 000024 000000 000024 000024 112772 034000 105631
00050: 000000 000174 000000 000174 000010 000004 000000 000004
00060: 000110 000124 000124 000124 000000 000044 000000 000004
00070: 000076 000104 000000 000000 000000 000000 000000 000000
00100: SAME: TO 000200-1

*T RECORD 198 (%306, #C6)
00000: 036000 060156 122201 005310 000000 000074 000100 000100
00010: 000100 000174 000000 000014 000060 000100 000060 000014
00020: 000000 000074 000100 000040 000100 000074 000000 000104
00030: 000050 000020 000050 000104 000000 000014 000120 000120
00040: 000040 000074 000000 000104 000144 000124 000114 000104
00050: 000000 000000 000010 000066 000101 000000 000000 000000
```

95

```
00060: 000000 000167 000000 000000 000000 113111 007400 105721
00070: 000000 000101 000000 000066 000000 000000 000000 000000
00100: SAME: TO 000200-1

*T RECORD 199 (%307, #C7)
00000: 020400 060130 057510 005366 000000 000010 000000 000004
00010: 000002 000002 000000 000002 000001 000052 000125 000052
00020: 000000 000125 000052 106603 002000 110263 000000 000000
00030: 001000 000000 000001 111264 000000 000400 110270 106262
00040: 016552 000000 000000 000000 000000 000000 000000 000000
00050: SAME: TO 000200-1

*T RECORD 200 (%310, #C8)
00000: 002000 120000 120000 000000 000000 000000 000000 000000
00010: SAME: TO 000200-1

*T RECORD 201 (%311, #C9)
00000: 025000 020000 124341 077117 046111 041040 000457 000000
00010: SAME: TO 000020-1
00020: 000000 020114 044502 051101 051131 020040 020117 051516
00030: 040524 020040 020040 020040 020074 034071 030062 031067
00040: 027061 032064 034476 020040 020040 020040 020040 020040
00050: 020040 020040 000000 000000 000000 000000 000000 000000
00060: SAME: TO 000200-1

*T RECORD 202 (%312, #CA)
00000: 003400 040001 046231 077117 046111 041000 000000 000000
00010: SAME: TO 000200-1

*T RECORD 203 (%313, #CB)
00000: 036000 060156 103576 000000 000000 000456 001000 110271
00010: 000040 000000 000000 110331 005000 110274 000100 000000
00020: 000000 000600 001000 000200 000100 000000 000000 000600
00030: 000040 000000 113334 002000 000000 110307 001000 000200
00040: 000100 000000 000000 111607 005000 110314 000040 000000
00050: 000000 000600 001000 000200 000040 000000 000000 000600
00060: 000100 000000 113314 001000 000000 110327 001000 000200
00070: 111527 034001 000000 003443 000000 000000 000000 000000
00100: SAME: TO 000200-1

*T RECORD 204 (%314, #CC)
00000: 036000 060156 060155 000056 000000 031460 000223 000040
00010: 006000 113573 000000 000200 000441 017000 033760 000003
00020: 000000 000442 017000 033474 000000 000443 000000 017000
00030: 113173 000000 000443 017000 000000 003561 000200 000441
00040: 017030 031760 000000 110273 000440 017360 031760 110313
00050: 000000 000440 017360 001563 000000 000500 000000 017030
00060: 031760 110306 000440 017360 000000 031760 110326 000440
00070: 017360 033760 000000 110271 000000 000000 000000 000000
00100: SAME: TO 000200-1

*T RECORD 205 (%315, #CD)
00000: 036000 060156 024057 000134 000000 000440 017000 031460
00010: 025554 000040 000000 006000 033760 110311 000440 017000
00020: 000000 074251 034001 003461 031460 025554 000000 000040
00030: 006000 033760 110301 000440 000000 017000 031460 025554
00040: 000040 006000 000000 033760 110321 000440 017000 031460
00050: 000000 025554 000040 006000 013462 000000 000000 000442
```

96

```
00060: 017000 031460 003450 120040 000000 005000 031460 000243
00070: 000040 006000 000000 031460 000000 000000 000000 000000
00100: SAME: TO 000200-1

*T RECORD 206 (%316, #CE)
00000: 036000 060156 041171 000212 000000 000000 000040 007000
00010: 031460 000000 000000 000440 017340 033760 000000 005500
00020: 000000 017000 031460 003503 040040 005140 000000 031760
00030: 000000 000500 017340 033760 000000 000000 000501 017000
00040: 113672 034001 000000 003477 013460 000000 000440 017000
00050: 000000 031460 003503 020040 005140 121561 000000 000000
00060: 000500 017000 031460 003477 000000 021040 016000 031460
00070: 000000 000040 000000 007000 000000 000000 000000 000000
00100: SAME: TO 000200-1

*T RECORD 207 (%317, #CF)
00000: 036000 060156 050155 000270 000000 001700 000000 000440
00010: 017035 101560 000000 000000 000500 017030 031760 101362
00020: 000000 000440 017360 031460 000000 000040 000000 007000
00030: 043561 000077 000441 017000 000000 013461 000000 000441
00040: 017000 001561 000000 074402 000440 017300 031462 000000
00050: 000000 000440 017070 001561 074476 000440 000000 017300
00060: 022650 034001 003515 031463 000000 000000 000440 007070
00070: 031760 000000 000000 006500 000000 000000 000000 000000
00100: SAME: TO 000200-1

*T RECORD 208 (%320, #D0)
00000: 036000 060156 126631 000346 000000 017000 031460 003537
00010: 020040 005000 000000 011477 000000 015440 017000 031460
00020: 000000 003530 020440 005000 031460 003524 000000 014040
00030: 005000 003537 003536 050040 000000 001000 123460 003536
00040: 050457 005000 000000 113760 000000 000516 017000 121177
00050: 000000 000000 000456 017000 031460 003537 000000 016040
00060: 016000 031460 003532 014040 000000 005000 003536 003537
00070: 050040 001000 000000 123460 000000 000000 000000 000000
00100: SAME: TO 000200-1

*T RECORD 209 (%321, #D1)
00000: 022400 060133 072403 000424 000000 003537 050457 005000
00010: 034733 012001 000000 003533 113760 000000 000516 017000
00020: 000000 121177 000000 000456 017000 031460 000000 003537
00030: 142040 016000 031460 000000 000000 002040 017000 031460
00040: 000000 000040 000000 007000 030625 000000 000000 000000
00050: SAME: TO 000200-1

*T RECORD 210 (%322, #D2)
00000: 002000 120000 120000 000000 000000 000000 000000 000000
00010: SAME: TO 000200-1

*T RECORD 211 (%323, #D3)
00000: 025000 020000 010066 077125 052111 046040 000660 000000
00010: SAME: TO 000020-1
00020: 000000 020125 052111 046111 052111 042523 020111 047516
00030: 044440 036070 033060 031060 031056 030465 032463 037040
00040: 020040 020040 020040 020040 020040 020040 020040 020040
00050: 020040 020040 000000 000000 000000 000000 000000 000000
00060: SAME: TO 000200-1
```

EP 0 455 351 A2

```
*T RECORD 212 (%324, #D4)
00000: 003400 040001 057237 077125 052111 046000 000000 000000
00010: SAME: TO 000200-1

*T RECORD 213 (%325, #D5)
00000: 036000 060156 065321 000000 000000 000657 034001 003540
00010: 031460 000000 000000 000440 017340 033760 000000 000501
00020: 000000 017140 033760 000000 000502 017140 000000 033760
00030: 000000 000503 017140 021760 000000 026400 000440 017300
00040: 033760 000400 000000 000440 017000 031460 003561 000040
00050: 000000 006000 021760 026000 000440 017300 000000 033760
00060: 000400 000440 017000 031463 000000 003561 000440 006030
00070: 021760 025400 000000 000440 000000 000000 000000 000000
00100: SAME: TO 000200-1

*T RECORD 214 (%326, #D6)
00000: 036000 060156 124172 000056 000000 017300 033760 000400
00010: 000440 017000 000000 031462 003561 000440 006030 021760
00020: 000000 025000 000440 017300 176456 034001 000000 003556
00030: 033760 000400 000440 017000 000000 031461 003561 000440
00040: 006030 031460 000000 003574 000040 016000 013460 000000
00050: 000000 000440 017160 031460 003561 120040 000000 005000
00060: 031460 000000 000040 007000 000000 033760 000377 000440
00070: 017000 031460 000000 000000 000000 000000 000000 000000
00100: SAME: TO 000200-1

*T RECORD 215 (%327, #D7)
00000: 036000 060156 161210 000134 000000 000440 017030 001560
00010: 025000 000440 000000 017360 001560 025400 000440 017360
00020: 000000 001560 026000 000440 017360 001560 000000 026400
00030: 000440 017360 013460 000000 000000 000440 017000 031460
00040: 003565 114040 000000 005000 052201 034001 003574 033760
00050: 000000 000125 000440 017000 031760 000145 000000 000440
00060: 017340 031560 000000 000500 000000 007070 101760 134721
00070: 000440 017300 000000 031460 000000 000000 000000 000000
00100: SAME: TO 000200-1

*T RECORD 216 (%330, #D8)
00000: 036000 060156 065714 000212 000000 000000 000040 017140
00010: 033760 000000 000000 000512 017140 033760 000000 000513
00020: 000000 017000 031760 110370 000440 017300 000000 031473
00030: 000000 000440 017170 101760 000000 000000 000440 017170
00040: 031472 000000 000000 000440 017170 041260 000000 000440
00050: 000000 017170 033760 110370 000440 017000 000000 031460
00060: 025314 000040 006000 033245 000000 034001 003612 031760
00070: 110376 000440 000000 017340 000000 000000 000000 000000
00100: SAME: TO 000200-1

*T RECORD 217 (%331, #D9)
00000: 036000 060156 101537 000270 000000 031760 000000 000500
00010: 017000 031460 000000 000000 015040 017000 031460 000000
00020: 000000 000040 007000 031460 000000 000100 000000 015000
00030: 031460 000000 000040 007000 000000 101460 000000 000440
00040: 017340 033760 000000 000000 000512 017140 033760 000000
00050: 000000 000513 017000 033760 100022 000451 000000 017000
00060: 031760 110346 000440 017300 000000 031473 000000 000440
00070: 017070 031460 000000 000000 000000 000000 000000 000000
00100: SAME: TO 000200-1
```

98

```
*T RECORD 218 (%332, #DA)
00000: 036000 060156 001143 000346 000000 000040 017100 031472
00010: 000000 000440 000000 017170 077743 034001 003630 033760
00020: 000000 000005 000444 017000 031460 000000 000000 000440
00030: 017340 003564 000000 000510 000000 017000 031760 110345
00040: 000440 017300 000000 031471 000000 000440 017070 103471
00050: 000000 000000 000451 017000 031760 110353 000000 000440
00060: 017300 121170 000000 000444 000000 017070 033760 110345
00070: 000440 017000 000000 031460 000000 000000 000000 000000
00100: SAME: TO 000200-1

*T RECORD 219 (%333, #DB)
00000: 036000 060156 150377 000424 000000 025200 000040 006000
00010: 013464 000000 000000 000444 017000 003633 000000 014040
00020: 000000 003000 103460 000000 000440 017340 000000 103461
00030: 000000 000441 017360 054436 000000 034001 003646 013462
00040: 000000 000442 000000 017000 003644 000000 020040 003000
00050: 000000 033760 144052 000440 017000 031460 000000 002745
00060: 000040 006000 031760 101414 000000 000440 017340 033760
00070: 177400 000440 000000 017000 000000 000000 000000 000000
00100: SAME: TO 000200-1

*T RECORD 220 (%334, #DC)
00000: 036000 060156 060660 000502 000000 031560 000000 000500
00010: 017070 031760 000000 000017 000440 017170 031760 143026
00020: 000000 000440 017300 033760 130033 000440 000000 017000
00030: 041260 001427 000440 006070 000000 031460 000000 000040
00040: 007000 031460 000000 000000 000440 017300 031760 110362
00050: 000000 000440 017070 110202 014001 003664 000000 031460
00060: 003620 000040 006000 031460 000000 000000 000040 007000
00070: 031460 000000 000000 000440 000000 000000 000000 000000
00100: SAME: TO 000200-1

*T RECORD 221 (%335, #DD)
00000: 036000 060156 172552 000560 000000 017340 033760 110331
00010: 000443 017000 000000 001563 003616 000500 006340 031460
00020: 000000 000000 000040 007000 022561 011400 000000 110331
00030: 034371 033556 033277 033277 000000 016264 033277 003662
00040: 033367 026132 000000 026154 026152 034401 000000 000000
00050: 000000 000001 000000 000001 000000 110354 000000 047771
00060: 003000 110370 100000 000000 000000 000000 000000 000000
00070: 110376 120766 000000 010000 000000 000000 000000 000000
00100: SAME: TO 000200-1

*T RECORD 222 (%336, #DE)
00000: 015000 060122 101756 000636 000000 110377 000001 000001
00010: 000001 000001 000000 177777 177777 177777 177777 000001
00020: 000000 000001 177777 177777 000001 000001 000000 177777
00030: 177777 110377 000000 000000 000000 000000 000000 000000
00040: SAME: TO 000200-1

*T RECORD 223 (%337, #DF)
00000: 002000 120000 120000 000000 000000 000000 000000 000000
00010: SAME: TO 000200-1

*T RECORD 224 (%340, #E0)
00000: 025000 020000 155745 077103 052104 051440 001274 000000
```

```
00010: SAME: TO 000020-1
00020: 000000 020103 047516 052111 047125 047525 051440 052117
00030: 047105 020104 044523 050114 040531 020040 036070 033461
00040: 031062 033456 031060 031465 037040 020040 020040 020040
00050: 020040 020040 000000 000000 000000 000000 000000 000000
00060: SAME: TO 000200-1


*T RECORD 225 (%341, #E1)
00000: 003400 040001 062610 077103 052104 051400 000000 000000
00010: SAME: TO 000200-1


*T RECORD 226 (%342, #E2)
00000: 036000 060156 162603 000000 000000 001273 034001 003672
00010: 031760 000076 000000 000440 017340 031760 000000 000500
00020: 000000 017000 031460 003672 120040 005000 000000 101760
00030: 100000 000440 017030 031760 000000 041400 014440 017760
00040: 101760 041400 000000 014440 017760 031460 000000 000040
00050: 000000 007000 103760 000000 000441 017000 000000 031760
00060: 000076 000440 017340 031760 000000 000000 000500 017000
00070: 031460 000000 000000 020040 000000 000000 000000 000000
00100: SAME: TO 000200-1


*T RECORD 227 (%343, #E3)
00000: 036000 060156 037424 000056 000000 007000 031460 000017
00010: 000240 017000 000000 103461 000000 000441 017000 031460
00020: 000000 003702 120040 005000 032634 034001 000000 003710
00030: 041260 000000 000440 007070 000000 033760 001000 000441
00040: 017000 033760 000000 003000 000442 017000 031760 145703
00050: 000000 000440 017340 121561 000000 000500 000000 017000
00060: 031460 003717 020040 005000 000000 121562 000000 000500
00070: 017000 031460 000000 034100 000000 000000 000000 000000
00100: SAME: TO 000200-1


*T RECORD 228 (%344, #E4)
00000: 036000 060156 177032 000134 000000 020040 006000 031460
00010: 003701 000040 000000 006000 101760 041400 000440 017700
00020: 000000 021760 000000 014440 017470 031460 000000 000000
00030: 000440 017030 031460 000000 000000 000100 035150 033760
00040: 160000 000440 000000 017000 032061 034001 003726 031460
00050: 000000 001427 000040 006000 031460 000000 000000 000040
00060: 031170 033760 000000 000400 000000 017000 031460 004420
00070: 000040 006000 000000 031460 000000 000000 000000 000000
00100: SAME: TO 000200-1


*T RECORD 229 (%345, #E5)
00000: 036000 060156 161011 000212 000000 000000 000100 035320
00010: 033760 000060 000000 000441 017000 041561 000000 000500
00020: 000000 017000 031460 000000 121440 017340 000000 033760
00030: 000000 000501 017000 043260 000000 000000 146443 017000
00040: 047561 003740 000000 000442 017002 031760 000076 000440
00050: 000000 017300 031462 000000 000440 017070 000000 033460
00060: 003750 054457 005300 132717 000000 034001 003744 033760
00070: 000400 000443 000000 017000 000000 000000 000000 000000
00100: SAME: TO 000200-1


*T RECORD 230 (%346, #E6)
00000: 036000 060156 054724 000270 000000 031760 000041 000440
00010: 017030 001563 000000 000022 014440 017760 031460 000000
```

```
00020: 000000 014040 017560 047561 074000 000445 000000 017002
00030: 045561 000036 000444 017002 000000 035464 000002 000644 ·
00040: 017000 001562 000000 000022 000440 017700 033760 002000
00050: 000000 000440 017000 001560 000041 014440 000000 017470
00060: 003162 000000 014443 017560 000000 001563 000004 000440
00070: 017700 031460 000000 000000 000000 000000 000000 000000
00100: SAME: TO 000200-1

*T RECORD 231 (%347, #E7)
00000: 036000 060156 152532 000346 000000 000040 017140 001564
00010: 000000 014500 000000 017470 131421 034001 003762 031460
00020: 000000 000000 000040 017140 031760 000000 000000 014500
00030: 017570 031460 000000 000040 000000 017140 033760 000000
00040: 000504 017000 000000 001565 000000 014500 017570 031460
00050: 000000 000000 000040 017140 031760 000000 000000 014500
00060: 017570 031760 000406 000440 000000 017700 031464 000000
00070: 014440 017470 000000 001563 000000 000000 000000 000000
00100: SAME: TO 000200-1

*T RECORD 232 (%350, #E8)
00000: 036000 060156 141745 000424 000000 000032 000440 017760
00010: 001700 000000 000000 001440 017036 033760 000000 000504
00020: 000000 017000 043260 000000 000443 017000 000000 111562
00030: 000300 000440 017000 162411 000000 034001 004000 031460
00040: 004003 120040 000000 005000 003564 000140 000444 017000
00050: 000000 031460 004016 000040 016000 033760 000000 000002
00060: 000443 017000 033462 000000 000000 000456 017000 041576
00070: 007400 002440 000000 017034 000000 000000 000000 000000
00100: SAME: TO 000200-1

*T RECORD 233 (%351, #E9)
00000: 036000 060156 130203 000502 000000 003564 004011 020504
00010: 005000 003564 000000 000160 000444 017000 031460 004023
00020: 000000 000040 016000 111562 000100 000440 000000 017000
00030: 031460 004015 120040 005000 000000 003564 000120 000444
00040: 017000 031460 000000 004016 000040 016000 003564 000100
00050: 000000 000444 017000 102521 034001 004016 000000 031461
00060: 000000 000440 017000 003443 000000 000000 014043 017000
00070: 031460 004023 000000 144040 000000 000000 000000 000000
00100: SAME: TO 000200-1

*T RECORD 234 (%352, #EA)
00000: 036000 060156 036374 000560 000000 005000 003564 000001
00010: 000444 017000 000000 003563 000210 000443 017000 031760
00020: 000000 043001 000440 017700 031464 000000 000000 014440
00030: 017470 031760 043400 000440 000000 017700 001563 000040
00040: 014440 017470 000000 031760 145655 000440 017340 031760
00050: 000000 000000 000500 017000 031460 004027 000000 020040
00060: 005000 041260 000000 000440 000000 017070 031760 041400
00070: 014440 017760 000000 135423 000000 000000 000000 000000
00100: SAME: TO 000200-1

*T RECORD 235 (%353, #EB)
00000: 036000 060156 112127 000636 000000 034001 004034 031460
00010: 000000 000040 000000 011000 033477 000000 000400 027330
00020: 000000 031460 000000 000040 037150 031760 000000 101372
00030: 000440 017340 033760 000000 000000 000502 017000 041260
00040: 000000 121440 000000 017070 013462 000000 000442 037170
```

```
00050: 000000 031460 030105 050040 006000 031760 000000 101362
00060: 000440 017340 033760 000000 000000 000500 017000 031460
00070: 004050 014040 000000 005000 000000 000000 000000 000000
00100: SAME: TO 000200-1

*T RECORD 236 (%354, #EC)
00000: 036000 060156 077722 000714 000000 004104 004105 120040
00010: 002000 043560 000000 000077 000440 017000 031760 101362
00020: 000000 000440 017300 166204 034001 004052 000000 041260
00030: 000000 000440 017070 011460 000000 000000 000440 017030
00040: 031760 101416 000000 000440 017360 031460 022534 000040
00050: 000000 006000 033760 100371 000440 017000 000000 031460
00060: 002745 000040 006000 033760 000000 100402 000440 017000
00070: 031460 002745 000000 000040 000000 000000 000000 000000
00100: SAME: TO 000200-1

*T RECORD 237 (%355, #ED)
00000: 036000 060156 133224 000772 000000 006000 033760 110417
00010: 000440 017000 000000 031460 003362 000040 006000 033760
00020: 000000 110427 000440 017000 031460 003362 000000 000040
00030: 006000 033760 074374 000440 000000 017000 031760 101417
00040: 000440 017340 000000 013256 034001 004070 101760 000000
00050: 000000 000500 017000 031460 002620 120040 000000 006000
00060: 031760 101416 000440 017340 000000 033760 000000 000501
00070: 017000 033461 000000 000000 000000 000000 000000 000000
00100: SAME: TO 000200-1

*T RECORD 238 (%356, #EE)
00000: 036000 060156 105012 001050 000000 000440 017000 001560
00010: 074402 000440 000000 017340 030760 000000 000500 017000
00020: 000000 031760 101413 000440 017360 001560 000000 074476
00030: 000440 017340 033760 000000 000000 000502 017000 031760
00040: 101414 000440 000000 017360 031460 002332 000040 006000
00050: 000000 031460 000000 000040 007000 031760 000000 101417
00060: 000440 017340 000332 034001 000000 004106 103760 000000
00070: 000501 017000 000000 031760 000000 000000 000000 000000
00100: SAME: TO 000200-1

*T RECORD 239 (%357, #EF)
00000: 036000 060156 113542 001126 000000 101416 000440 017340
00010: 101760 000000 000000 000500 017000 031460 000000 020040
00020: 000000 007000 111561 000100 000440 017000 000000 031460
00030: 004115 121040 005000 033760 000000 000003 000441 017000
00040: 001561 074361 000000 000440 017360 031461 000000 000440
00050: 000000 017030 031760 101417 000440 017360 000000 031460
00060: 000000 050040 007000 123561 000000 000100 000441 017000
00070: 001561 074361 000000 000440 000000 000000 000000 000000
00100: SAME: TO 000200-1

*T RECORD 240 (%360, #F0)
00000: 036000 060156 176214 001204 000000 017340 033760 000000
00010: 000501 017140 000000 107166 014001 004124 033760 000000
00020: 000000 000502 017140 033760 000000 000503 000000 017000
00030: 031760 074361 000440 017300 000000 031461 000000 000440
00040: 017070 031462 000000 000000 000440 017170 031463 000000
00050: 000000 000440 007170 065770 010000 110417 000000 000001
00060: 000051 000003 000054 000356 000000 000420 000004 000045
00070: 000205 000255 000000 000001 000000 000000 000000 000000
```

```
00100: SAME: TO 000200-1


*T RECORD 241 (%361, #F1)
00000: 010000 060112 177364 001262 000000 000000 000535 000577
00010: 000001 000000 000000 113637 000400 000076 000000 000076
00020: 000000 000000 000000 000000 000000 000000 000000 000000
00030: SAME: TO 000200-1


*T RECORD 242 (%362, #F2)
00000: 002000 120000 120000 000000 000000 000000 000000 000000
00010: SAME: TO 000200-1


*T RECORD 243 (%363, #F3)
00000: 025000 020000 060063 077103 047515 046440 006022 000000
00010: SAME: TO 000020-1
00020: 000000 020103 047515 046525 047111 041501 052111 047516
00030: 020120 040503 045501 043505 020074 034460 030462 030065
00040: 027061 031060 033476 020040 020040 020040 020040 020040
00050: 020040 020040 000000 000000 000000 000000 000000 000000
00060: SAME: TO 000200-1


*T RECORD 244 (%364, #F4)
00000: 003400 040001 055221 077103 .047515 046400 000000 000000
00010: SAME: TO 000200-1


*T RECORD 245 (%365, #F5)
00000: 036000 060156 005150 000000 000000 006021 001000 110437
00010: 000000 012002 000000 122441 002400 122441 000000 000000
00020: 000000 004500 000000 000000 127141 006000 000000 000340
00030: 000000 000000 000000 000000 000000 000000 000000 000000
00040: 000000 110437 000000 000000 000000 122441 033440 034001
00050: 000000 004132 033460 000000 000441 017030 000000 031760
00060: 000340 000440 017360 031760 000000 000341 000440 017340
00070: 031760 000000 000000 000500 000000 000000 000000 000000
00100: SAME: TO 000200-1


*T RECORD 246 (%366, #F6)
00000: 036000 060156 001777 000056 000000 017000 031460 004165
00010: 020040 005140 000000 033760 000000 001502 017000 031460
00020: 000000 004153 120040 005000 111560 000001 000000 000440
00030: 017070 003560 000004 000441 000000 017000 031460 004451
00040: 000040 006000 000000 031460 000132 050040 005000 031760
00050: 000000 000346 000440 017340 031760 000000 000000 000500
00060: 017000 031460 000132 120040 000000 005000 032747 034001
00070: 004150 031760 000000 000340 000000 000000 000000 000000
00100: SAME: TO 000200-1


*T RECORD 247 (%367, #F7)
00000: 036000 060156 161137 000134 000000 000440 017340 033760
00010: 000000 000501 000000 017000 033760 000001 000442 017000
00020: 000000 031760 000344 000440 017340 103760 000000 000000
00030: 000500 017070 031460 000000 000000 000440 017300 031461
00040: 000000 000440 000000 017070 011462 000000 000440 017030
00050: 000000 031760 000342 000040 017360 031460 000000 000132
00060: 120040 005000 031760 000341 000000 000440 017300 041260
00070: 004315 000440 000000 006070 000000 000000 000000 000000
00100: SAME: TO 000200-1
```

103

```
*T RECORD 248 (%370, #F8)
00000: 036000 060156 047175 000212 000000 000132 000132 050040
00010: 001000 043561 000000 077777 000442 017000 174063 034001
00020: 000000 004166 111561 100000 000440 017000 000000 031461
00030: 000132 020440 005000 021760 000000 000000 015440 017030
00040: 031760 000341 000000 000440 017360 041260 000000 000440
00050: 000000 017170 113562 000120 000442 017030 000000 031460
00060: 004201 050040 005000 031760 000000 000001 000440 017030
00070: 031760 000342 000000 000440 000000 000000 000000 000000
00100: SAME: TO 000200-1


*T RECORD 249 (%371, #F9)
00000: 036000 060156 000436 000270 000000 017360 033760 000006
00010: 000441 017000 000000 043260 000000 000442 017030 031760
00020: 000000 000343 000440 017360 004143 000132 000000 050040
00030: 001000 033760 000350 000442 000000 017340 064166 034001
00040: 004204 033760 000000 000000 000500 017000 001560 000001
00050: 000000 000440 017340 121561 000000 005500 000000 017000
00060: 033760 004215 024503 005000 000000 001560 000000 000440
00070: 017340 031760 000000 000000 000000 000000 000000 000000
00100: SAME: TO 000200-1


*T RECORD 250 (%372, #FA)
00000: 036000 060156 046453 000346 000000 001500 017000 031460
00010: 004215 020040 000000 005000 033460 000000 000442 017000
00020: 000000 033760 004205 000500 016000 031460 000000 004217
00030: 150040 005000 043260 000000 000000 000440 007000 121163
00040: 000000 000441 000000 017000 031460 004226 120040 005000
00050: 000000 111562 000350 000440 017000 016275 000000 034001
00060: 004222 031460 004216 020040 000000 005000 001560 000000
00070: 000440 017340 000000 001562 000000 000000 000000 000000
00100: SAME: TO 000200-1


*T RECORD 251 (%373, #FB)
00000: 036000 060156 111662 000424 000000 000000 000440 017360
00010: 031460 000000 000000 000040 007000 021163 000000 000441
00020: 000000 017000 113161 004210 020443 005030 000000 001560
00030: 000001 000440 017360 003163 000000 000000 000440 007000
00040: 031760 000352 000000 000440 017340 033760 000000 000500
00050: 000000 017000 001560 000001 000440 017340 000000 033760
00060: 000000 000501 017000 001560 000000 000003 000440 017340
00070: 033760 004245 000000 000500 000000 000000 000000 000000
00100: SAME: TO 000200-1


*T RECORD 252 (%374, #FC)
00000: 036000 060156 062122 000502 000000 006000 151602 034001
00010: 004240 031460 000000 000000 000040 007000 033760 000004
00020: 000000 000441 017000 031760 000352 000440 000000 017340
00030: 033760 004245 000500 006000 000000 031460 000000 000040
00040: 007000 031760 000000 000350 000440 017340 111560 000000
00050: 000000 000500 017000 033760 004251 020102 000000 005000
00060: 031460 004256 024040 005000 000000 031460 000000 000440
00070: 017070 031462 000000 000000 000000 000000 000000 000000
00100: SAME: TO 000200-1


*T RECORD 253 (%375, #FD)
00000: 036000 060156 076536 000560 000000 000440 017030 001560
00010: 000000 000440 000000 017360 031461 000000 000440 017170
```

104

```
00020: 000000 033460 004277 000442 016000 156661 000000 034001
00030: 004256 001562 000000 000440 000000 017340 033760 000000
00040: 000503 017000 000000 121163 004263 021440 005000 031460
00050: 000000 004263 024040 005000 033463 004256 000000 000442
00060: 016000 001562 000001 000440 000000 017340 003562 000000
00070: 000504 017000 000000 121164 000000 000000 000000 000000
00100: SAME: TO 000200-1

*T RECORD 254 (%376, #FE)
00000: 036000 060156 155376 000636 000000 000000 000440 017000
00010: 031460 004270 000000 120040 005000 001561 004277 000500
00020: 000000 016070 031463 000000 000440 017030 000000 001560
00030: 000000 000440 017360 031460 000000 000000 000440 017030
00040: 001562 000000 000000 000440 017360 026741 034001 004274
00050: 000000 031461 000000 000440 017030 001560 000000 000001
00060: 000440 017360 033460 000000 000000 000442 017000 001562
00070: 000001 000440 000000 017340 000000 000000 000000 000000
00100: SAME: TO 000200-1

*T RECORD 255 (%377, #FF)
00000: 036000 060156 053275 000714 000000 033760 000000 000504
00010: 017000 003162 000000 000000 000444 017000 001562 000000
00020: 000000 000440 017340 033760 000000 000503 000000 017000
00030: 121163 000000 000444 017000 000000 031460 000000 120040
00040: 007000 001563 000000 000001 000440 017340 033760 000000
00050: 000000 000504 017000 001562 000001 000440 000000 017340
00060: 001564 000000 000500 017070 000000 051710 034001 004312
00070: 001563 000000 000000 000440 000000 000000 000000 000000
00100: SAME: TO 000200-1

*T RECORD 256 (%400, #100)
00000: 036000 060156 162663 000772 000000 017340 001562 000000
00010: 000440 017360 000000 031460 000000 000040 007000 031760
00020: 000000 000345 000440 017340 033760 000000 000000 000500
00030: 017000 031760 122442 000440 000000 017340 033760 000000
00040: 000502 017000 000000 031460 004323 020440 005030 001562
00050: 000000 000000 000440 017360 031760 122442 000000 000440
00060: 017360 031760 122441 000440 000000 017340 031760 000000
00070: 000500 017000 000000 031460 000000 000000 000000 000000
00100: SAME: TO 000200-1

*T RECORD 257 (%401, #101)
00000: 036000 060156 160357 001050 000000 000000 120040 007000
00010: 031460 000000 000000 000440 007070 100520 034001 004330
00020: 000000 031460 004420 000040 006000 031460 000000 000000
00030: 000100 037330 031760 000353 000000 000440 017340 033760
00040: 000000 000500 000000 017000 004340 000000 020040 003000
00050: 000000 001560 000004 000440 017340 033760 000000 000000
00060: 000500 017000 031460 004370 000000 020040 005000 031760
00070: 000351 000440 000000 017360 000000 000000 000000 000000
00100: SAME: TO 000200-1

*T RECORD 258 (%402, #102)
00000: 036000 060156 074123 001126 000000 001560 000000 000440
00010: 017340 031760 000000 000352 000440 017300 033760 000000
00020: 000000 000501 017060 031460 004335 020040 000000 005000
00030: 001561 000000 000440 017340 000000 026611 034001 004346
00040: 031760 000000 000000 000500 017000 001560 000000 021440
```

105

```
00050: 000000 017360 031460 004352 150040 005000 000000 001560
00060: 000001 000440 017360 031460 000000 004353 000040 006000
00070: 031460 000000 000000 000040 000000 000000 000000 000000
00100: SAME: TO 000200-1


*T RECORD 259 (%403, #103)
00000: 036000 060156 164331 001204 000000 011000 033760 000000
00010: 000402 017000 000000 001562 000012 000440 017030 031460
00020: 000000 000000 000100 015000 001560 000002 000000 000440
00030: 017340 031460 000000 000100 000000 015000 001561 000003
00040: 000440 017340 000000 033760 000000 000500 017240 033760
00050: 000000 000000 000501 017240 071751 034001 000000 004364
00060: 023760 000000 000502 007000 000000 031460 004241 000040
00070: 006000 031760 000000 000351 000000 000000 000000 000000
00100: SAME: TO 000200-1


*T RECORD 260 (%404, #104)
00000: 036000 060156 102643 001262 000000 000440 017340 033760
00010: 004341 000500 000000 016000 031760 000346 000440 017340
00020: 000000 031760 000000 000500 017000 041260 000000 000000
00030: 000040 017070 031460 004416 000000 020040 005000 031760
00040: 000343 000440 000000 017340 031760 000000 000500 017000
00050: 000000 031760 000342 121440 017340 033760 000000 000005
00060: 000441 017000 003541 000000 000000 150501 017000 031460
00070: 004451 000040 000000 006000 000000 000000 000000 000000
00100: SAME: TO 000200-1


*T RECORD 261 (%405, #105)
00000: 036000 060156 032107 001340 000000 157563 034001 004402
00010: 031760 000346 000000 000440 017340 031760 000000 000500
00020: 000000 017000 031460 000000 120040 007000 000000 031460
00030: 004416 050040 005000 031760 000000 000344 000440 017340
00040: 103760 000000 000000 000500 017000 031760 000340 000440
00050: 000000 017340 031460 000000 000440 017360 000000 041260
00060: 000000 000440 017030 031760 000000 000341 000440 017360
00070: 031760 000342 000000 000440 000000 000000 000000 000000
00100: SAME: TO 000200-1


*T RECORD 262 (%406, #106)
00000: 036000 060156 065224 001416 000000 017360 031460 004315
00010: 000040 006000 000000 031460 004420 000040 006000 031460
00020: 000000 000000 000100 027320 145462 034001 000000 004420
00030: 031460 000000 000440 017030 000000 031460 000000 000100
00040: 015000 033760 000000 000007 000440 017000 031760 000337
00050: 000000 000440 017340 031760 000000 000500 000000 017000
00060: 031460 004427 020040 005000 000000 033760 000005 000440
00070: 017000 001560 000000 104516 000000 000000 000000 000000
00100: SAME: TO 000200-1


*T RECORD 263 (%407, #107)
00000: 036000 060156 176667 001474 000000 000440 017340 031460
00010: 000000 000040 000000 011000 033760 000000 000400 007000
00020: 000000 031760 000350 000440 017300 031760 000000 110437
00030: 000440 017070 041260 000000 000000 000440 017030 031760
00040: 000341 000440 000000 017360 107140 034001 004436 031760
00050: 000000 000346 000440 017360 031760 000347 000000 000440
00060: 017360 031760 110437 000440 000000 017360 031760 012002
00070: 000440 017170 000000 033760 000000 000000 000000 000000
```

```
00100: SAME: TO 000200-1

*T RECORD 264 (%410, #108)
00000: 036000 060156 154427 001552 000000 000347 000440 017000
00010: 001560 000004 000000 000440 017340 033760 000000 000501
00020: 000000 017000 041260 000000 021440 017030 000000 001561
00030: 000000 000440 017360 033461 000000 000000 000440 017160
00040: 004443 000000 000000 050040 003000 031460 004203 000040
00050: 000000 006000 031460 000000 000440 017000 000000 001740
00060: 000000 020040 017030 005730 000000 034001 004454 031760
00070: 000346 000040 000000 017360 000000 000000 000000 000000
00100: SAME: TO 000200-1

*T RECORD 265 (%411, #109)
00000: 036000 060156 166241 001630 000000 031460 004473 020040
00010: 005000 031460 000000 000000 000440 017030 031760 000345
00020: 000000 000440 017360 031760 000342 000440 000000 017340
00030: 033760 000000 000502 017140 000000 033760 000000 000503
00040: 017000 031460 000000 000000 121440 017300 041260 000000
00050: 000000 000440 017070 101462 000000 000440 000000 017170
00060: 031463 000000 000440 017170 000000 001560 000004 000440
00070: 017170 003560 000000 000003 000000 000000 000000 000000
00100: SAME: TO 000200-1

*T RECORD 266 (%412, #10A)
00000: 036000 060156 115553 001706 000000 000440 017030 031760
00010: 000344 000440 000000 017360 054711 024001 004472 031460
00020: 000000 000000 000040 007000 031760 000343 000000 000440
00030: 017340 031760 000000 000500 000000 017000 031460 000000
00040: 121040 017000 000000 031460 004420 000040 006000 031460
00050: 000000 000000 000100 027330 043561 000377 000000 000443
00060: 017000 001563 122446 000440 000000 017340 031460 000000
00070: 000100 015000 000000 031460 000000 000000 000000 000000
00100: SAME: TO 000200-1

*T RECORD 267 (%413, #10B)
00000: 036000 060156 063464 001764 000000 000000 000040 007000
00010: 047561 022400 000000 122446 004744 004504 004512 004514
00020: 000000 004612 004653 004740 004742 004744 000000 004763
00030: 005001 005001 005003 005005 000000 005007 005026 005117
00040: 005123 005125 000000 005134 005136 005140 005140 005140
00050: 000000 005140 005156 005221 005251 005257 000000 005261
00060: 005263 005265 005274 005277 000000 005324 005331 005334
00070: 017576 034001 000000 004504 000000 000000 000000 000000
00100: SAME: TO 000200-1

*T RECORD 268 (%414, #10C)
00000: 036000 060156 161105 002042 000000 031460 003711 000040
00010: 006000 031760 000000 130473 000440 017340 031760 000000
00020: 000000 000500 017000 031460 005352 040040 000000 005000
00030: 031460 032766 000040 006000 000000 031460 000000 000040
00040: 007000 031460 000000 002745 000040 006000 031460 005352
00050: 000000 000040 016000 031460 005354 000040 000000 006000
00060: 033760 005354 000502 006000 000000 033760 000000 000503
00070: 017000 007163 000000 000002 000000 000000 000000 000000
00100: SAME: TO 000200-1

*T RECORD 269 (%415, #10D)
```

```
00000: 036000 060156 000016 002120 000000 000643 017002 033163
00010: 005354 000442 000000 006000 033760 005354 000503 006000
00020: 000000 042476 034001 004522 103760 000000 000000 000501
00030: 017000 041561 004000 000440 000000 017000 004526 003510
00040: 120040 002000 000000 031460 000000 000040 007000 041561
00050: 000000 010000 000440 017000 004531 001516 000000 120040
00060: 002000 031460 000000 000040 000000 007000 041561 040000
00070: 000440 017000 000000 043561 000000 000000 000000 000000
00100: SAME: TO 000200-1

*T RECORD 270 (%416, #10E)
00000: 036000 060156 105421 002176 000000 000077 121444 017030
00010: 031460 004535 000000 050040 005000 031564 100000 000440
00020: 000000 017030 031760 101362 000440 017360 000000 013464
00030: 000000 000444 017000 031460 000000 004575 020040 005000
00040: 177267 034001 000000 004540 033760 000006 000445 017000
00050: 000000 001565 122513 000440 017340 031760 000000 000000
00060: 000500 017000 033760 000077 000000 015440 017000 041560
00070: 000000 000500 000000 017030 000000 000000 000000 000000
00100: SAME: TO 000200-1

*T RECORD 271 (%417, #10F)
00000: 036000 060156 002036 002254 000000 121564 000000 000500
00010: 017000 031460 000000 004551 020040 005000 013465 000000
00020: 000000 000445 017000 004571 004541 114040 000000 001000
00030: 001565 122531 000440 017340 000000 033760 000000 000506
00040: 017000 033463 000000 004555 050440 005000 033462 000000
00050: 000000 000440 017000 031460 004547 020040 000000 005000
00060: 153020 034001 004556 001565 000000 122522 000440 017340
00070: 033760 000000 000000 000500 000000 000000 000000 000000
00100: SAME: TO 000200-1

*T RECORD 272 (%420, #110)
00000: 036000 060156 175132 002332 000000 017000 031760 000142
00010: 000440 017340 000000 041560 000000 000500 017000 031460
00020: 000000 004547 120040 005000 001565 122540 000000 000440
00030: 017340 031460 004567 050040 000000 005000 043166 000000
00040: 000442 017000 000000 033562 004547 000502 016000 043166
00050: 000000 000000 000443 017000 033563 004547 000000 000503
00060: 016000 001564 074402 000440 000000 017300 031462 000000
00070: 000440 017070 000000 001564 000000 000000 000000 000000
00100: SAME: TO 000200-1

*T RECORD 273 (%421, #111)
00000: 036000 060156 037200 002410 000000 074476 000440 017300
00010: 034625 034001 000000 004574 031463 000000 000440 017070
00020: 000000 031760 101417 000440 017340 041561 000000 020000
00030: 000440 017000 031460 004601 000000 020040 005000 021760
00040: 000000 000440 000000 017070 103760 000000 000445 017000
00050: 000000 111564 000006 000440 017000 031460 000000 004606
00060: 020040 005000 111564 000060 000000 000440 017000 043260
00070: 004610 120445 000000 005000 000000 000000 000000 000000
00100: SAME: TO 000200-1

*T RECORD 274 (%422, #112)
00000: 036000 060156 166312 002466 000000 031760 146224 000440
00010: 017300 031465 000000 032751 000440 006070 031460 004036
00020: 000000 000040 006000 031460 005352 000040 000000 016000
```

108

```
00030: 003330 034001 004612 031760 000000 101414 000440 017340
00040: 033760 177400 000000 000452 017000 031572 000000 000500
00050: 000000 017070 031460 005354 000040 006000 000000 033760
00060: 005354 000512 006000 033760 000000 000000 000513 017000
00070: 111572 000002 000000 000440 000000 000000 000000 000000
00100: SAME: TO 000200-1


*T RECORD 275 (%423, #113)
00000: 036000 060156 035501 002544 000000 017000 031460 004624
00010: 014040 005000 000000 111572 000003 000440 017000 031460
00020: 000000 017521 040040 006000 001572 122547 000000 000440
00030: 017340 033760 000000 000514 000000 017340 033760 000000
00040: 000503 017000 000000 043563 177400 000440 017000 135660
00050: 000000 034001 004630 035460 000006 000640 000000 017002
00060: 033560 170000 000440 017000 000000 031460 001427 000040
00070: 006000 043563 000000 000377 000000 000000 000000 000000
00100: SAME: TO 000200-1


*T RECORD 276 (%424, #114)
00000: 036000 060156 167210 002622 000000 000440 017000 033560
00010: 170000 000440 000000 017000 031460 001427 000040 006000
00020: 000000 103474 000000 000454 017340 013473 000000 000000
00030: 000453 017000 031460 004626 000000 120040 005000 111572
00040: 000033 000440 000000 017000 031460 005352 120040 005000
00050: 000000 031760 074000 000440 017340 031760 000000 000000
00060: 000500 017000 021760 005352 000000 020500 005030 133305
00070: 012001 004646 000000 031460 000000 000000 000000 000000
00100: SAME: TO 000200-1


*T RECORD 277 (%425, #115)
00000: 036000 060156 053407 002700 000000 005352 020040 005060
00010: 031760 135023 000000 000440 017300 031760 032766 000440
00020: 000000 017070 031460 002301 000040 006000 000000 031460
00030: 005352 000040 016000 123574 000000 033400 122513 000012
00040: 000012 000023 000000 100041 100044 000053 000002 000100
00050: 000000 000200 000100 000020 000020 000000 000000 000000
00060: 177717 177477 176377 000374 000000 000374 000077 177717
00070: 000040 000200 000000 001000 000000 000000 000000 000000
00100: SAME: TO 000200-1


*T RECORD 278 (%426, #116)
00000: 036000 060156 160605 002756 000000 000002 000002 000100
00010: 000000 101413 000000 134721 134630 134630 135326 146453
00020: 000000 146653 147253 147653 150253 110362 000000 147574
00030: 144244 001003 135336 144336 000000 025000 025400 026000
00040: 026400 146363 000000 000000 142265 147611 151343 146313
00050: 000000 001007 076153 003000 122603 074026 000000 152677
00060: 146502 144640 146255 000040 000000 053407 034001 004653
00070: 031460 000000 000000 000440 000000 000000 000000 000000
00100: SAME: TO 000200-1


*T RECORD 279 (%427, #117)
00000: 036000 060156 133063 003034 000000 017340 033760 000000
00010: 000513 017140 000000 041573 040000 016440 017000 043573
00020: 000000 037777 000053 017000 033760 004716 000000 120514
00030: 005000 031760 004730 000440 000000 017030 033460 017774
00040: 000455 006000 000000 001575 000002 000440 017340 033760
00050: 000000 000000 000513 017140 033760 000000 000000 000514
```

EP 0 455 351 A2

```
00060: 017000 031760 004730 000440 000000 017030 031460 017765
00070: 000040 006000 000000 033760 000000 000000 000000 000000
00100: SAME: TO 000200-1

*T RECORD 280 (%430, #118)
00000: 036000 060156 107146 003112 000000 000014 000440 017000
00010: 033760 000052 000000 000441 017000 002013 034001 004671
00020: 000000 033760 000053 000442 017000 031760 000000 054525
00030: 000440 017030 001560 074402 000000 000440 017360 001561
00040: 074402 000440 000000 017360 031760 000125 000440 017030
00050: 000000 001560 074476 000440 017360 001561 000000 074476
00060: 000440 017360 001562 074476 000000 000440 017360 031760
00070: 130471 000440 000000 017300 000000 000000 000000 000000
00100: SAME: TO 000200-1

*T RECORD 281 (%431, #119)
00000: 036000 060156 040344 003170 000000 041260 000000 000440
00010: 017070 031760 000000 000001 000440 017030 031760 101411
00020: 000000 000440 017360 031760 145302 000440 000000 017360
00030: 031760 144731 000440 017360 000000 037020 034001 004707
00040: 043260 035577 000000 000442 006000 031760 101376 000440
00050: 000000 017360 031760 101377 000440 017360 000000 031760
00060: 154221 000440 017360 031760 000000 154264 000440 017360
00070: 031760 142656 000000 000440 000000 000000 000000 000000
00100: SAME: TO 000200-1

*T RECORD 282 (%432, #11A)
00000: 036000 060156 132125 003246 000000 017360 031460 005352
00010: 000040 016000 000000 031760 122613 000440 017300 031473
00020: 000000 000000 000440 017070 031474 000000 000000 000440
00030: 017170 001560 000002 000440 000000 017340 033760 000000
00040: 000513 017140 000000 031760 122612 000440 017360 031473
00050: 000000 000000 000440 017270 075256 034001 000000 004725
00060: 033760 122610 000440 017000 000000 031460 033445 000040
00070: 006000 031460 000000 005352 000000 000000 000000 000000
00100: SAME: TO 000200-1

*T RECORD 283 (%433, #11B)
00000: 036000 060156 033136 003324 000000 000040 016000 031473
00010: 000000 000440 000000 017030 001560 000022 000440 017360
00020: 000000 031460 004734 154040 005000 041260 000000 000000
00030: 000440 017030 001560 000013 000000 000440 017360 031474
00040: 000000 000440 000000 017030 001560 000023 000440 017360
00050: 000000 031460 000000 000040 007000 031460 000000 003145
00060: 000040 006000 031460 005352 000000 000040 016000 031460
00070: 000702 000040 000000 006000 000000 000000 000000 000000
00100: SAME: TO 000200-1

*T RECORD 284 (%434, #11C)
00000: 036000 060156 126031 003402 000000 105030 034001 004743
00010: 031460 005352 000000 000040 016000 031460 005354 000040
00020: 000000 006000 031461 000000 000440 017000 000000 031460
00030: 004761 020040 005000 033760 000000 000000 000501 017000
00040: 111561 072032 000000 000440 017000 031460 004753 120040
00050: 000000 005000 033760 100004 000441 017000 000000 031460
00060: 005354 000040 006000 033760 000000 005354 000502 006000
00070: 033760 005354 000000 000503 000000 000000 000000 000000
00100: SAME: TO 000200-1
```

110

```
*T RECORD 285 (%435, #11D)
00000: 036000 060156 102762 003460 000000 006000 033760 005354
00010: 000504 006000 000000 033760 005546 000505 006000 031460
00020: 000000 005352 000040 016000 104605 034001 000000 004761
00030: 033760 005545 000500 006000 000000 031460 005352 000040
00040: 016000 031460 000000 005354 000040 006000 103760 134752
00050: 000000 005442 017000 033760 177773 000443 000000 017000
00060: 103463 000000 000443 017000 000000 031460 004773 020040
00070: 005000 103462 000000 000000 000000 000000 000000 000000
00100: SAME: TO 000200-1

*T RECORD 286 (%436, #11E)
00000: 036000 060156 140264 003536 000000 000442 017360 031460
00010: 005354 000040 000000 006000 031460 004766 000040 016000
00020: 000000 031460 004776 050040 005000 103760 000000 134765
00030: 000442 017000 031460 004765 000000 001040 016000 101760
00040: 000000 000440 000000 017030 010057 034001 004777 031760
00050: 000000 134720 000440 017360 031460 005352 000000 000040
00060: 016000 031460 013637 000040 000000 006000 031460 005352
00070: 000040 016000 000000 031460 000000 000000 000000 000000
00100: SAME: TO 000200-1

*T RECORD 287 (%437, #11F)
00000: 036000 060156 172744 003614 000000 005405 000040 006000
00010: 031460 005352 000000 000040 016000 031460 003666 000040
00020: 000000 006000 031460 005352 000040 016000 000000 031460
00030: 005354 000040 006000 033760 000000 000000 000503 017000
00040: 001563 122615 000000 000440 017340 023760 000000 000501
00050: 000000 017000 013460 000000 000440 017000 000000 113562
00060: 000002 000442 017000 003607 000000 022001 005015 103460
00070: 000000 000440 000000 017340 000000 000000 000000 000000
00100: SAME: TO 000200-1

*T RECORD 288 (%440, #120)
00000: 036000 060156 066267 003672 000000 013462 000000 000442
00010: 017000 103461 000000 000000 021441 017360 031460 005015
00020: 000000 150040 005000 111563 000015 000440 000000 017000
00030: 031460 032100 020040 006000 000000 111563 000020 000440
00040: 017000 031460 000000 023055 020040 006000 031460 005352
00050: 000000 000040 016000 120272 012000 122615 000000 135412
00060: 137413 135336 146453 150653 000000 146653 151253 147253
00070: 151653 147653 000000 152253 000000 000000 000000 000000
00100: SAME: TO 000200-1

*T RECORD 289 (%441, #121)
00000: 036000 060156 137453 003750 000000 150253 146363 141646
00010: 141720 142647 000000 144733 150316 146466 146342 077724
00020: 000000 034001 005026 033760 122633 000440 000000 017000
00030: 031760 001007 000440 017340 000000 031760 000000 000500
00040: 017000 031460 000000 000000 021040 017000 003560 000007
00050: 000000 000440 017340 101760 000000 000500 000000 017000
00060: 005037 005041 020041 001000 000000 001560 000004 000440
00070: 017300 031760 000000 002000 000000 000000 000000 000000
00100: SAME: TO 000200-1

*T RECORD 290 (%442, #122)
00000: 036000 060156 052021 004026 000000 000440 017070 031460
```

111

```
00010: 002745 000040 000000 006000 031460 005032 000040 016000
00020: 000000 031460 005044 050040 005000 033760 000000 000200
00030: 000442 017000 031460 002606 000000 000040 006000 070527
00040: 034001 005044 000000 033760 122641 000440 017000 031460
00050: 000000 005405 000040 006000 031460 016062 000000 000040
00060: 006000 041260 000000 000440 000000 017030 031760 134736
00070: 000440 017360 000000 031760 000000 000000 000000 000000
00100: SAME: TO 000200-1

*T RECORD 291 (%443, #123)
00000: 036000 060156 117577 004104 000000 135023 000440 017360
00010: 031760 135022 000000 000440 017360 031760 130471 000440
00020: 000000 017360 031760 145651 000440 017360 000000 031760
00030: 101376 000440 017360 031760 000000 101377 000440 017360
00040: 031760 142655 000000 000440 017340 021760 000000 000500
00050: 000000 017000 031460 024443 020040 006000 000000 170266
00060: 034001 005062 031760 146160 000000 000440 017340 021760
00070: 000000 000500 000000 017000 000000 000000 000000 000000
00100: SAME: TO 000200-1

*T RECORD 292 (%444, #124)
00000: 036000 060156 101621 004162 000000 031460 032100 020040
00010: 006000 033760 000000 000400 000440 017000 031760 145703
00020: 000000 000440 017340 121560 000000 000500 000000 017000
00030: 041260 005073 020440 005030 000000 031760 145704 000440
00040: 017360 031460 000000 003564 000040 006000 031760 074476
00050: 000000 000440 017300 031760 052525 000440 000000 017030
00060: 031460 000001 000240 017160 000000 101760 074402 000440
00070: 017360 031760 000000 052505 000000 000000 000000 000000
00100: SAME: TO 000200-1

*T RECORD 293 (%445, #125)
00000: 036000 060156 060707 004240 000000 000440 017170 124013
00010: 034001 005100 000000 031760 012525 000440 017170 033760
00020: 000000 000007 000440 017000 031460 020563 000000 000040
00030: 006000 031760 000145 000440 000000 017340 033760 010400
00040: 000440 017000 000000 031560 000000 000500 017070 041260
00050: 000000 000000 000440 017030 023760 141720 000000 000440
00060: 017300 103760 000000 000520 000000 017160 111560 141731
00070: 000440 017000 000000 031460 000000 000000 000000 000000
00100: SAME: TO 000200-1

*T RECORD 294 (%446, #126)
00000: 036000 060156 007402 004316 000000 005110 120040 005000
00010: 021760 000000 000000 000440 017030 031760 141724 000440
00020: 000000 017360 031760 141731 000440 017360 000000 020122
00030: 002001 005116 031460 005352 000000 000040 016000 062210
00040: 000400 122641 000000 000000 122641 013000 122642 100024
00050: 000000 000000 001000 000000 000600 000000 000000 000000
00060: 100025 000000 001000 000000 000000 000600 000000 000000
00070: 100031 000000 000000 001000 000000 000000 000000 000000
00100: SAME: TO 000200-1

*T RECORD 295 (%447, #127)
00000: 036000 060156 030036 004374 000000 000000 000600 000000
00010: 000000 177777 000000 030143 034001 005117 031460 000000
00020: 000000 000440 017340 033760 000000 000501 000000 017140
00030: 033760 026651 000500 006000 000000 031460 005352 000040
```

```
00040: 016000 031460 000000 027231 000040 006000 031460 005352
00050: 000000 000040 016000 031460 022722 000040 000000 006000
00060: 031760 144276 000440 017340 000000 031760 000000 000500
00070: 017000 031460 000000 005133 000000 000000 000000 000000
00100: SAME: TO 000200-1
```

```
*T RECORD 296 (%450, #128)
00000: 036000 060156 146710 004452 000000 020040 005000 031460
00010: 024360 000040 000000 006000 031460 026537 000040 006000
00020: 000000 031460 005352 000040 016000 031460 000000 022644
00030: 000040 006000 015416 034001 000000 005135 031460 005352
00040: 000040 016000 000000 031460 034123 000040 006000 031460
00050: 000000 005352 000040 016000 113563 000025 000000 000441
00060: 017000 037461 000000 000441 000000 017002 003561 134021
00070: 000441 017340 000000 023760 000000 000000 000000 000000
00100: SAME: TO 000200-1
```

```
*T RECORD 297 (%451, #129)
00000: 036000 060156 164440 004530 000000 000000 000502 017000
00010: 013460 000000 000000 000440 017000 001561 000010 000440
00020: 000000 017340 033760 000000 000503 017000 000000 033760
00030: 000377 000441 017000 103460 000000 000000 000440 017340
00040: 103462 000000 000000 000442 017360 013461 000000 000441
00050: 000000 017000 177770 034001 005153 031460 000000 005150
00060: 114040 005000 031760 000145 000000 000440 017340 031563
00070: 005352 000500 000000 016070 000000 000000 000000 000000
00100: SAME: TO 000200-1
```

```
*T RECORD 298 (%452, #12A)
00000: 036000 060156 175454 004606 000000 031460 005354 000040
00010: 006000 033760 000000 000000 000501 017000 031460 005204
00020: 000000 020040 005000 031460 005217 014040 000000 005000
00030: 031460 005354 000040 006000 000000 033760 000000 000502
00040: 017000 043562 000000 000377 000443 017000 035462 000006
00050: 000000 000642 017002 043260 000000 000444 000000 017000
00060: 035461 000000 000441 017000 000000 031461 000000 000440
00070: 017000 074702 000000 034001 000000 000000 000000 000000
00100: SAME: TO 000200-1
```

```
*T RECORD 299 (%453, #12B)
00000: 036000 060156 107564 004664 000000 005171 031460 005201
00010: 114040 005000 000000 003564 134021 000445 017340 001562
00020: 000000 000000 000500 017300 031463 000000 000000 000440
00030: 017070 001565 000010 000440 000000 017340 033760 000000
00040: 000505 017000 000000 031760 000145 000440 017340 031565
00050: 000000 000000 000500 017070 003564 000002 000000 000444
00060: 017000 111564 000010 000440 000000 017000 005220 005167
00070: 120040 001000 000000 031460 000000 000000 000000 000000
00100: SAME: TO 000200-1
```

```
*T RECORD 300 (%454, #12C)
00000: 036000 060156 053470 004742 000000 005354 000040 006000
00010: 033760 000377 000000 000440 017000 001560 025000 000440
00020: 000000 017360 160755 034001 005207 001560 000000 025400
00030: 000440 017360 001560 026000 000000 000440 017360 001560
00040: 026400 000440 000000 017360 013460 000000 000440 017000
00050: 000000 031460 005206 114040 005000 033760 000000 000125
00060: 000440 017000 031760 000145 000000 000440 017340 031560
```

```
00070: 005220 000500 000000 016070 000000 000000 000000 000000
00100: SAME: TO 000200-1


*T RECORD 301 (%455, #12D)
00000: 036000 060156 063713 005020 000000 031460 003564 000040
00010: 006000 031460 000000 005352 000040 016000 031460 005354
00020: 000000 000040 006000 033760 000000 000503 000000 017000
00030: 043563 000377 000444 017000 000000 041563 177400 002440
00040: 017034 023021 000000 034001 005225 033760 000000 000503
00050: 000000 017000 031460 005354 000040 006000 000000 033760
00060: 000000 000505 017000 033460 000000 000000 000446 017000
00070: 031760 000352 000000 000440 000000 000000 000000 000000
00100: SAME: TO 000200-1


*T RECORD 302 (%456, #12E)
00000: 036000 060156 030644 005076 000000 017340 033760 000000
00010: 000500 017000 000000 001560 000001 000440 017340 033760
00020: 000000 000000 000507 017000 113567 000003 000000 000447
00030: 017000 031460 005336 000040 000000 006000 001660 024570
00040: 000440 017300 000000 031464 000000 000440 017070 031563
00050: 000000 000160 000440 017170 031465 000000 000000 000440
00060: 017170 143354 034001 005243 000000 031466 000000 000440
00070: 017170 031467 000000 000000 000000 000000 000000 000000
00100: SAME: TO 000200-1


*T RECORD 303 (%457, #12F)
00000: 036000 060156 151104 005154 000000 000440 017170 031460
00010: 000000 000040 000000 037150 031760 001002 000440 017340
00020: 000000 031562 000000 000500 017070 031460 000000 000000
00030: 000040 027170 031460 000000 000000 000440 017340 101760
00040: 000000 000500 000000 017000 005256 002745 120040 002000
00050: 000000 003560 000012 000440 017340 031460 000000 005252
00060: 000040 016000 031460 005352 000000 000040 016000 031460
00070: 002545 000040 000000 006000 000000 000000 000000 000000
00100: SAME: TO 000200-1


*T RECORD 304 (%460, #130)
00000: 036000 060156 006473 005232 000000 031460 005352 000040
00010: 016000 051114 000000 034001 005261 031460 033017 000040
00020: 000000 006000 031460 005352 000040 016000 000000 031460
00030: 033365 000040 006000 031460 000000 005352 000040 016000
00040: 031460 000000 000000 000440 017340 030760 000000 000500
00050: 000000 017140 033760 000000 000500 017140 000000 033760
00060: 000000 000501 017140 033760 000000 000000 000502 017140
00070: 033760 027075 000000 000503 000000 000000 000000 000000
00100: SAME: TO 000200-1


*T RECORD 305 (%461, #131)
00000: 036000 060156 156776 005310 000000 006000 031460 005352
00010: 000040 016000 000000 033760 122670 000440 017000 031460
00020: 000000 025554 000040 006000 031460 005352 000000 000040
00030: 016000 162644 034001 005277 000000 031460 005354 000040
00040: 006000 033760 000000 000000 000503 017000 031460 005354
00050: 000000 000040 006000 033760 000000 000504 000000 017000
00060: 031460 005354 000040 006000 000000 033760 000000 000505
00070: 017000 031460 000000 005354 000000 000000 000000 000000
00100: SAME: TO 000200-1
```

```
*T RECORD 306 (%462, #132)
00000: 036000 060156 104643 005366 000000 000040 006000 033760
00010: 000000 000506 000000 017000 031460 005354 000040 006000
00020: 000000 033760 000000 000507 017000 031460 000000 005336
00030: 000040 006000 001660 024570 000000 000440 017300 031463
00040: 000000 000440 000000 017070 031464 000000 000440 017170
00050: 000000 067201 034001 005315 031465 000000 000000 000440
00060: 017170 031466 000000 000440 000000 017170 031467 000000
00070: 000440 017170 000000 031460 000000 000000 000000 000000
00100: SAME: TO 000200-1

*T RECORD 307 (%463, #133)
00000: 036000 060156 144015 005444 000000 000000 000040 037150
00010: 031760 001002 000000 000440 017340 031562 000000 000500
00020: 000000 017070 031460 000000 000040 027170 000000 031460
00030: 000000 000440 017340 031760 000000 000000 000500 017000
00040: 031460 005352 000000 020040 005000 031760 130500 000440
00050: 000000 017360 031460 005352 000040 016000 000000 031460
00060: 000000 000440 017340 031460 000000 036734 000040 006000
00070: 137003 006001 000000 005333 000000 000000 000000 000000
00100: SAME: TO 000200-1

*T RECORD 308 (%464, #134)
00000: 036000 060156 065004 005522 000000 031460 005352 000040
00010: 016000 031460 000000 033431 000040 006000 031460 005352
00020: 000000 000040 016000 032670 004000 122670 000000 100023
00030: 000000 000000 100022 000000 000000 000000 001000 001000
00040: 124735 034001 000000 005336 031760 001002 000440 017340
00050: 000000 033760 001000 000442 017000 023760 000000 000000
00060: 000440 017000 103460 000000 000000 000440 017000 041562
00070: 000000 000500 000000 017000 000000 000000 000000 000000
00100: SAME: TO 000200-1

*T RECORD 309 (%465, #135)
00000: 036000 060156 134737 005600 000000 031460 005347 020040
00010: 005000 037462 000000 000000 000442 017000 031462 000000
00020: 000000 000440 017000 005341 005336 014040 000000 001000
00030: 030760 000005 000440 017000 000000 031460 003435 000040
00040: 006000 031460 000000 000000 000040 007000 031460 004232
00050: 000000 000040 006000 031460 000000 000040 000000 007000
00060: 132274 004001 005354 031460 000000 000000 000440 017340
00070: 103460 000000 000000 000440 000000 000000 000000 000000
00100: SAME: TO 000200-1

*T RECORD 310 (%466, #136)
00000: 036000 060156 122340 005656 000000 007000 172154 034001
00010: 005356 031460 000000 000000 000040 037150 031760 000347
00020: 000000 000440 017340 101760 000000 000500 000000 017070
00030: 023760 000000 000502 037170 000000 001562 122700 000440
00040: 017300 031460 000000 000000 000440 017070 001562 122724
00050: 000000 000440 017300 031461 000000 000440 000000 007070
00060: 031460 000000 000040 037150 000000 031760 000347 000440
00070: 017340 031760 000000 000000 000000 000000 000000 000000
00100: SAME: TO 000200-1

*T RECORD 311 (%467, #137)
00000: 036000 060156 154037 005734 000000 000500 017000 031460
00010: 005377 020040 000000 005000 023760 000000 000505 017070
```

115

```
00020: 000000 001565 122724 000440 017340 113234 000000 022001
00030: 005374 033760 000000 000501 000000 017000 001565 122700
00040: 000440 017340 000000 033760 005400 000500 006000 031460
00050: 000000 000000 000040 027170 031460 004420 000000 000040
00060: 006000 033760 000000 000506 000000 037330 031460 004245
00070: 000040 006000 000000 031466 000000 000000 000000 000000
00100: SAME: TO 000200-1


*T RECORD 312 (%470, #138)
00000: 007000 060110 104065 006012 000000 000000 000440 017030
00010: 031460 000000 000000 000100 027320 115153 000000 000000
00020: SAME: TO 000200-1


*T RECORD 313 (%471, #139)
00000: 002000 120000 120000 000000 000000 000000 000000 000000
00010: SAME: TO 000200-1


*T RECORD 314 (%472, #13A)
00000: 025000 020000 004421 077106 047103 052040 000704 000000
00010: SAME: TO 000020-1
00020: 000000 020106 052516 041524 044517 047040 052122 042505
00030: 020040 036070 032460 031462 033056 030071 031065 037040
00040: 020040 020040 020040 020040 020040 020040 020040 020040
00050: 020040 020040 000000 000000 000000 000000 000000 000000
00060: SAME: TO 000200-1


*T RECORD 315 (%473, #13B)
00000: 003400 040001 060212 077106 047103 052000 000000 000000
00010: SAME: TO 000200-1


*T RECORD 316 (%474, #13C)
00000: 036000 060156 063005 000000 000000 000703 034001 005405
00010: 041260 000000 000000 000440 017030 023760 122750 000443
00020: 000000 017000 103463 000016 000643 017360 000000 103463
00030: 000016 000643 017360 033460 000000 000000 000443 017340
00040: 033760 000000 000000 000511 017000 043260 005431 022450
00050: 000000 005000 103471 000000 000442 017000 000000 023760
00060: 123012 000445 017000 023760 000000 000000 000450 017000
00070: 013462 000000 000000 000442 000000 000000 000000 000000
00100: SAME: TO 000200-1


*T RECORD 317 (%475, #13D)
00000: 036000 060156 167773 000056 000000 017000 103470 005430
00010: 020450 005000 000000 103463 000000 000443 017340 033760
00020: 000000 000000 000506 017140 123027 034001 000000 005423
00030: 033760 077777 000447 017000 000000 043567 000000 000507
00040: 017000 103465 000000 000000 000445 017340 121566 000000
00050: 000000 000500 017000 103167 005417 020443 000000 005000
00060: 013167 000000 000443 017000 000000 031760 123011 000440
00070: 017340 033760 000000 000000 000000 000000 000000 000000
00100: SAME: TO 000200-1


*T RECORD 318 (%476, #13E)
00000: 036000 060156 130121 000134 000000 000505 017000 031760
00010: 123010 000440 000000 017340 113570 000000 000506 017000
00020: 000000 031460 005455 140040 005000 031460 000000 005443
00030: 014040 005000 121170 000000 000000 000451 017000 031460
00040: 005455 020040 000000 005000 035014 034001 005441 001570
```

116

```
00050: 000000 123066 000440 017340 033760 005455 000000 000505
00060: 016000 033760 000000 000500 000000 017000 003560 123012
00070: 000440 017000 000000 020566 000000 000000 000000 000000
00100: SAME: TO 000200-1


*T RECORD 319 (%477, #13F)
00000: 036000 060156 043437 000212 000000 122770 000440 017000
00010: 001565 000001 000000 000440 017340 033760 000000 000505
00020: 000000 017100 003566 000001 000446 017140 000000 001066
00030: 000000 121440 017360 021760 000000 000000 000440 017030
00040: 013460 000000 000000 000440 017360 031460 005446 050040
00050: 000000 005000 121170 000000 000451 017030 000000 033760
00060: 000000 021506 017000 171604 000000 034001 005457 013470
00070: 000000 000450 000000 017000 000000 000000 000000 000000
00100: SAME: TO 000200-1


*T RECORD 320 (%500, #140)
00000: 036000 060156 113220 000270 000000 003570 123012 000450
00010: 017000 020566 000000 122760 000440 017000 023566 123000
00020: 000000 000441 017000 001161 005504 050446 000000 005300
00030: 031463 000000 000440 017340 000000 023760 000000 000502
00040: 017000 103463 000000 000000 000444 017140 103563 000000
00050: 000000 000503 017000 103466 000000 000446 000000 017000
00060: 001066 000000 121440 017300 000000 031464 000000 000440
00070: 017070 103470 000000 000000 000000 000000 000000 000000
00100: SAME: TO 000200-1


*T RECORD 321 (%501, #141)
00000: 036000 060156 040043 000346 000000 000450 017300 101462
00010: 000000 000440 000000 017070 034553 034001 005475 101462
00020: 000000 000000 003440 017036 003565 000000 000000 000505
00030: 017000 001565 000002 000440 000000 017340 001161 000000
00040: 000446 017360 000000 001565 000000 000440 017340 103463
00050: 000000 005504 150443 005000 033760 005464 000000 000505
00060: 016000 001166 000000 000441 000000 017300 021760 000000
00070: 000440 017170 000000 031465 000000 000000 000000 000000
00100: SAME: TO 000200-1


*T RECORD 322 (%502, #142)
00000: 036000 060156 125150 000424 000000 000000 000440 017030
00010: 031760 123011 000000 000440 017360 031471 000000 000440
00020: 000000 017030 031760 123010 000440 017360 000000 023760
00030: 122750 000456 017000 176661 000000 034001 005513 023760
00040: 122770 000457 000000 017000 103477 000000 000457 017340
00050: 000000 103476 000000 000456 017000 033760 000000 000000
00060: 000500 017000 101760 005514 000000 020500 005000 031460
00070: 005534 020040 000000 005000 000000 000000 000000 000000
00100: SAME: TO 000200-1


*T RECORD 323 (%503, #143)
00000: 036000 060156 016155 000502 000000 031476 000000 000420
00010: 015030 031477 000000 000000 000500 015030 031460 000000
00020: 000000 000100 015000 031460 005530 000040 000000 015000
00030: 031460 000000 000440 017030 000000 031476 000000 000500
00040: 015340 033760 000000 000000 000500 007000 031460 000000
00050: 000000 000040 011000 030717 030001 005531 000000 033760
00060: 000000 000417 011000 033760 000000 000000 000416 011000
00070: 031760 005514 000000 003400 000000 000000 000000 000000
```

117

```
00100: SAME: TO 000200-1

*T RECORD 324 (%504, #144)
00000: 036000 060156 107062 000560 000000 016010 005535 000000
00010: 154040 003000 000000 021760 123012 000440 017300 021760
00020: 000000 000000 000440 017030 031460 000006 000000 000240
00030: 017160 041260 000000 000440 000000 017030 031760 123010
00040: 000440 017360 000000 031760 123022 000440 017030 031760
00050: 000000 123011 000440 017360 031460 000000 000000 000040
00060: 007000 176342 001000 123010 000000 000000 000000 123010
00070: 023000 123022 000000 000000 000000 000000 000000 000000
00100: SAME: TO 000200-1

*T RECORD 325 (%505, #145)
00000: 031000 060146 160004 000636 000000 123022 034743 035206
00010: 000000 123022 000000 034751 035206 000000 123022 036157
00020: 000000 036344 000000 123022 036147 036344 000000 123052
00030: 123022 000000 000000 000000 000000 123022 026165 026414
00040: 000000 123052 000000 000000 000000 000000 123052 033317
00050: 000000 033341 000000 123052 000000 000000 000000 123022
00060: 123052 011011 000000 000000 000000 000000 000000 000000
00070: SAME: TO 000200-1

*T RECORD 326 (%506, #146)
00000: 002000 120000 120000 000000 000000 000000 000000 000000
00010: SAME: TO 000200-1

*T RECORD 327 (%507, #147)
00000: 025000 020000 105404 077103 051124 043040 026272 000000
00010: SAME: TO 000020-1
00020: 000000 020103 051124 020127 044524 044040 043125 047103
00030: 052111 047516 020113 042531 051440 020040 020074 034071
00040: 030062 030070 027061 033460 031476 020040 020040 020040
00050: 020040 020040 000000 000000 000000 000000 000000 000000
00060: SAME: TO 000200-1

*T RECORD 328 (%510, #148)
00000: 003400 040001 053230 077103 051124 043000 000000 000000
00010: SAME: TO 000200-1

*T RECORD 329 (%511, #149)
00000: 036000 060156 075373 000000 000000 026271 034001 005545
00010: 031460 005570 000000 000440 016030 041260 000000 000440
00020: 000000 017030 031760 127561 000440 017360 000000 031760
00030: 127553 000440 017360 031760 000000 127470 000440 017300
00040: 031461 000000 000000 000440 017170 031760 127472 000440
00050: 000000 017300 031462 000000 000440 017170 000000 031760
00060: 127474 000440 017300 031463 000000 000000 000440 017170
00070: 031760 127476 000000 000440 000000 000000 000000 000000
00100: SAME: TO 000200-1

*T RECORD 330 (%512, #14A)
00000: 036000 060156 137661 000056 000000 017300 031464 000000
00010: 000440 017170 000000 031760 127500 000440 017300 031465
00020: 000000 000000 000440 017170 076474 012001 000000 005563
00030: 033760 000233 000440 017000 000000 031460 005545 000040
00040: 006000 033760 000000 000305 000440 017000 031460 005545
00050: 000000 000040 006000 031460 000000 000040 000000 007000
```

118

```
00060: 110655 034000 125364 000001 000000 000005 000011 000000
00070: 000002 000006 000000 000012 000000 000000 000000 000000
00100: SAME: TO 000200-1

*T RECORD 331 (%513, #14B)
00000: 036000 060156 122562 000134 000000 000000 000003 000007
00010: 000013 000000 000000 000004 000010 000014 000000 177777
00020: 000000 070234 070232 065026 065032 064232 000000 065016
00030: 070226 070216 070434 070432 000000 070426 070416 070230
00040: 070430 000041 000000 000140 001600 000101 000040 000100
00050: 000000 010200 000400 001000 064200 064222 000000 011000
00060: 064220 064230 064234 177777 000000 000001 000010 000010
00070: 000010 000020 000000 000040 000000 000000 000000 000000
00100: SAME: TO 000200-1

*T RECORD 332 (%514, #14C)
00000: 036000 060156 100476 000212 000000 000100 000200 040000
00010: 030175 005400 000000 125454 000004 000060 000300 037470
00020: 000000 037710 177777 000012 000012 000036 000000 000050
00030: 177777 025570 034000 125467 000000 020201 101203 102205
00040: 103207 104314 000000 146637 142772 154754 152726 164301
00050: 000000 142303 141324 151721 150313 145033 000000 030462
00060: 031464 032466 033470 034460 000000 026475 004140 033470
00070: 034455 004521 000000 053505 000000 000000 000000 000000
00100: SAME: TO 000200-1

*T RECORD 333 (%515, #14D)
00000: 036000 060156 065312 000270 000000 051124 054525 044517
00010: 050133 056534 000000 020064 032466 026101 051504 043107
00020: 000000 044112 045514 035447 006461 031063 000000 004532
00030: 054103 053102 047115 026056 000000 027440 030040 027040
00040: 020040 020040 000000 020040 020040 020040 020040 020040
00050: 000000 100671 034000 125557 020040 020040 000000 020040
00060: 020040 020040 020040 020040 000000 020040 020201 101203
00070: 102205 103207 000000 104314 000000 000000 000000 000000
00100: SAME: TO 000200-1

*T RECORD 334 (%516, #14E)
00000: 036000 060156 012500 000346 000000 146440 020040 020352
00010: 152726 143301 000000 142303 141324 151721 150313 145033
00020: 000000 020500 021444 022536 023052 024051 000000 057453
00030: 004176 021540 040055 164561 000000 073545 071164 074565
00040: 064557 070173 000000 076574 077533 056135 020141 071544
00050: 000000 063147 064152 065554 035042 006573 000000 076175
00060: 004572 074143 073142 067155 000000 036076 037440 057040
00070: 054710 034000 000000 125647 000000 000000 000000 000000
00100: SAME: TO 000200-1

*T RECORD 335 (%517, #14F)
00000: 036000 060156 033074 000424 000000 077011 020040 020040
00010: 020040 020040 000000 020040 020040 020040 020040 020040
00020: 000000 020040 020040 020040 020040 020040 000000 020040
00030: 020201 101203 102372 166331 000000 104314 146440 020372
00040: 020040 152726 000000 164301 142303 141324 151721 150313
00050: 000000 145033 030462 031464 032466 033470 000000 034460
00060: 026475 004000 033470 034455 000000 004421 013405 011024
00070: 014425 004417 000000 010033 000000 000000 000000 000000
00100: SAME: TO 000200-1
```

119

EP 0 455 351 A2

```
*T RECORD 336 (%520, #150)
00000: 036000 060156 175570 000502 000000 016434 020064 032466
00010: 164401 011404 000000 003007 004012 005414 035540 006461
00020: 000000 050232 034000 125737 031462 004432 000000 014003
00030: 013002 007015 026056 027440 000000 030060 027011 020040
00040: 020040 020040 000000 020040 020040 020040 020040 020040
00050: 000000 020040 020040 020040 020040 020040 000000 020040
00060: 020040 020201 101203 102372 000000 166207 104314 146440
00070: 020040 020352 000000 152726 000000 000000 000000 000000
00100: SAME: TO 000200-1

*T RECORD 337 (%521, #151)
00000: 036000 060156 063416 000560 000000 143301 142303 141324
00010: 151721 150313 000000 145033 020400 021444 022437 023052
00020: 000000 024051 020053 004037 021400 000055 000000 164421
00030: 013405 011024 014425 004417 000000 010033 017034 020033
00040: 101661 020400 000000 126027 016036 164401 111404 003007
00050: 000000 004012 005414 035042 006433 016036 000000 004432
00060: 014003 013002 007015 036076 000000 037440 017036 017011
00070: 020040 020040 000000 020040 000000 000000 000000 000000
00100: SAME: TO 000200-1

*T RECORD 338 (%522, #152)
00000: 036000 060156 137160 000636 000000 020040 020040 020040
00010: 020040 020040 000000 020040 020040 020040 020040 020040
00020: 000000 020040 020040 177777 117502 034000 000000 127470
00030: 100032 100032 000000 000000 000000 000000 000000 000111
00040: 000001 000022 000000 000001 000300 000140 000000 000000
00050: SAME: TO 000060-1
00060: 123070 126070 000111 000001 000000 000000 000000 000000
00070: SAME: TO 000200-1

*T RECORD 339 (%523, #153)
00000: 036000 060156 125241 000714 000000 000000 000000 000000
00010: SAME: TO 000040-1
00040: 000000 000000 000000 000000 001643 010000 127560 000000
00050: SAME: TO 000060-1
00060: 000000 000000 000000 000000 000000 000000 005740 000000
00070: 127600 127622 000000 015142 000000 000000 000000 000000
00100: SAME: TO 000200-1

*T RECORD 340 (%524, #154)
00000: 036000 060156 153010 000772 000000 000400 127662 000000
00010: 127662 032001 000000 005570 031760 127663 000440 017360
00020: 000000 031760 127662 000440 017340 031760 000000 000000
00030: 000500 017000 031460 005577 000000 020040 005000 111560
00040: 100133 000440 000000 017000 041260 005604 120440 005030
00050: 000000 033760 100122 000440 017060 041560 000000 100000
00060: 003440 017036 030760 000000 000000 000500 017000 031560
00070: 100000 000440 000000 017030 000000 000000 000000 000000
00100: SAME: TO 000200-1

*T RECORD 341 (%525, #155)
00000: 036000 060156 021561 001050 000000 001660 127664 000440
00010: 017360 021160 000000 005605 000440 006170 031460 000000
00020: 000000 000040 007000 027614 000400 127663 000000 000000
00030: 127663 003000 127664 000000 000000 000000 000000 000000
```

120

```
00040: 000000 000000 000000 127664 034001 005605 031460 000000
00050: 000000 001040 017000 031760 127664 000440 000000 017340
00060: 033760 005640 150500 005000 000000 041260 005617 020440
00070: 005030 043560 000000 000377 000000 000000 000000 000000
00100: SAME: TO 000200-1

*T RECORD 342 (%526, #156)
00000: 036000 060156 066463 001126 000000 000440 017060 030760
00010: 000377 000440 000000 017140 101760 000000 000500 017000
00020: 000000 041660 005616 020100 005030 001740 000000 127560
00030: 014440 017360 031460 005702 000000 000040 006000 031760
00040: 127666 000440 000000 017340 033760 000000 000500 017000
00050: 000000 041260 005624 020440 005030 043560 000000 000777
00060: 000440 017060 042467 034001 000000 005623 031460 005774
00070: 000040 006140 000000 031760 000000 000000 000000 000000
00100: SAME: TO 000200-1

*T RECORD 343 (%527, #157)
00000: 036000 060156 073773 001204 000000 127670 000440 017340
00010: 033760 000000 000000 005500 017140 031460 005641 120040
00020: 000000 006000 031760 127670 000440 017340 000000 033760
00030: 005637 150500 005140 030760 000000 000000 000500 017000
00040: 041260 000000 000000 000440 017270 043560 000003 000440
00050: 000000 017000 001560 127664 000440 017300 000000 031660
00060: 000200 002440 017074 031260 000000 000000 000440 017170
00070: 031460 005606 000000 000040 000000 000000 000000 000000
00100: SAME: TO 000200-1

*T RECORD 344 (%530, #158)
00000: 036000 060156 151461 001262 000000 016000 031460 000000
00010: 000040 007000 000000 176610 034001 005641 031760 000000
00020: 000000 000500 017000 001740 127552 014440 000000 017340
00030: 033760 000000 000516 017000 000000 041560 177400 002440
00040: 017034 021760 000000 000000 000500 017030 021760 005651
00050: 000000 020500 005030 021760 005653 020500 000000 005030
00060: 005666 005655 020040 001000 000000 041576 001000 000440
00070: 017000 031460 000000 005666 000000 000000 000000 000000
00100: SAME: TO 000200-1

*T RECORD 345 (%531, #159)
00000: 036000 060156 132254 001340 000000 020040 005000 041576
00010: 000400 000440 000000 017000 031460 005677 120040 005000
00020: 000000 031760 127670 000440 017340 030760 000000 000377
00030: 000440 017000 124674 034001 000000 005657 040660 000000
00040: 000500 017000 000000 001660 001400 000440 017070 031760
00050: 000000 000022 000440 017030 041576 000100 000000 000440
00060: 017000 005700 006260 120040 000000 002000 041576 004000
00070: 000440 017000 000000 031460 000000 000000 000000 000000
00100: SAME: TO 000200-1

*T RECORD 346 (%532, #15A)
00000: 036000 060156 166536 001416 000000 006303 120040 006000
00010: 031760 127670 000000 000440 017340 030760 000377 000440
00020: 000000 017000 040660 000000 000500 017000 000000 001660
00030: 002000 000440 017070 031760 000000 130103 000440 017340
00040: 031760 000000 000000 000500 017000 031460 005677 014040
00050: 000000 005000 171041 012001 005675 041576 000000 000100
00060: 000440 017000 031460 005700 000000 020040 005000 031460
```

121

```
00070: 005701 001040 000000 016000 000000 000000 000000 000000
00100: SAME: TO 000200-1


*T RECORD 347 (%533, #15B)
00000: 036000 060156 031641 001474 000000 031460 000000 005040
00010: 017000 031460 000000 000000 000040 007000 150534 034001
00020: 000000 005702 041560 000200 000440 017037 000000 033760
00030: 005757 120501 006000 031760 000000 127556 000440 017340
00040: 043560 100177 000000 005440 017000 033561 005710 014516
00050: 000000 005030 053576 000100 001456 017030 000000 041576
00060: 000100 000440 017060 033760 000000 127506 122444 017000
00070: 033760 127534 000000 000445 000000 000000 000000 000000
00100: SAME: TO 000200-1


*T RECORD 348 (%534, #15C)
00000: 036000 060156 177362 001552 000000 017000 033760 127536
00010: 000446 017000 000000 005720 006506 050042 002000 033760
00020: 000000 127512 000444 017000 033760 127530 000000 000445
00030: 017000 033760 127532 000446 000000 017000 147341 034001
00040: 005720 031464 000000 000000 000440 017340 031760 127510
00050: 000000 000440 017360 031465 000000 000440 000000 017340
00060: 031760 127524 000440 017360 000000 031466 000000 000440
00070: 017340 031760 000000 127526 000000 000000 000000 000000
00100: SAME: TO 000200-1


*T RECORD 349 (%535, #15D)
00000: 036000 060156 076137 001630 000000 000440 017360 031460
00010: 012172 000040 000000 006000 043560 000177 005440 017000
00020: 000000 031460 005766 000040 006000 041260 000000 005733
00030: 050440 005030 031760 127560 000000 000440 017360 033760
00040: 127512 000441 000000 017000 033760 127530 000442 017000
00050: 000000 033760 127532 000443 017000 157745 000000 034001
00060: 005736 041576 000100 000440 000000 017000 031460 005743
00070: 020040 005000 000000 033760 000000 000000 000000 000000
00100: SAME: TO 000200-1


*T RECORD 350 (%536, #15E)
00000: 036000 060156 176467 001706 000000 127506 000441 017000
00010: 033760 127534 000000 000442 017000 033760 127536 000443
00020: 000000 017000 031760 127510 000440 017340 000000 031461
00030: 000000 000440 017360 031760 000000 127524 000440 017340
00040: 031462 000000 000000 000440 017360 031760 127526 000440
00050: 000000 017340 031463 000000 000440 017360 000000 031460
00060: 000000 000040 017000 031460 000000 010713 150040 006000
00070: 031460 012172 000000 000040 000000 000000 000000 000000
00100: SAME: TO 000200-1


*T RECORD 351 (%537, #15F)
00000: 036000 060156 147305 001764 000000 006000 132342 006001
00010: 005754 041576 000000 000020 000440 017000 031460 005757
00020: 000000 120040 006000 031460 000000 000040 000000 007000
00030: 115451 016001 005757 030760 000000 000110 000440 017000
00040: 021760 127470 000000 000440 017300 110660 000002 000440
00050: 000000 017140 033760 005765 014517 005140 000000 031460
00060: 000000 000040 017260 031477 000000 005761 000440 016170
00070: 031460 000000 000000 000040 000000 000000 000000 000000
00100: SAME: TO 000200-1
```

```
*T RECORD 352 (%540, #160)
00000: 036000 060156 134611 002042 000000 007000 054455 014001
00010: 005766 031760 000000 127560 000440 017340 030760 127672
00020: 000000 000440 017000 001660 000000 000500 000000 017340
00030: 031760 000000 000500 017000 000000 031460 000000 000100
00040: 015000 031460 000000 000000 000040 007000 012740 034000
00050: 000000 127672 006315 006343 006343 006343 000000 006343
00060: 006343 006343 006345 006361 000000 006365 006455 006343
00070: 006343 006467 000000 006475 000000 000000 000000 000000
00100: SAME: TO 000200-1

*T RECORD 353 (%541, #161)
00000: 036000 060156 004225 002120 000000 006502 006343 006511
00010: 006343 006343 000000 006343 006343 006343 006343 006343
00020: 000000 006343 006343 006514 006343 006343 000000 006343
00030: 006343 006530 006343 006343 000000 006343 006343 006343
00040: 006532 006343 000000 006343 006550 006343 006343 006343
00050: 000000 006343 006343 006343 006343 006557 000000 006574
00060: 006611 006621 006632 006643 000000 006643 104665 034000
00070: 127762 006643 000000 006343 000000 000000 000000 000000
00100: SAME: TO 000200-1

*T RECORD 354 (%542, #162)
00000: 036000 060156 173661 002176 000000 006343 006343 006343
00010: 006343 006343 000000 006343 006654 006655 006656 006673
00020: 000000 006672 006710 007053 006467 007070 000000 006365
00030: 007101 007155 007243 007266 000000 007325 007332 007335
00040: 007446 007453 000000 007460 007461 007465 007466 007501
00050: 000000 007504 007507 007515 006643 006343 000000 006643
00060: 007523 007524 007525 007525 000000 007607 007612 007615
00070: 006343 006343 000000 007771 000000 000000 000000 000000
00100: SAME: TO 000200-1

*T RECORD 355 (%543, #163)
00000: 036000 060156 066136 002254 000000 007070 006366 007773
00010: 010004 010015 000000 010026 006343 006343 151123 014400
00020: 000000 130052 006343 006343 006343 006343 000000 006343
00030: 006343 006343 006343 006343 000000 007507 010034 006643
00040: 006343 006343 000000 007523 006343 010133 010275 010275
00050: 000000 010276 010310 006343 010451 006343 000000 010451
00060: 013232 034001 005774 030760 000000 000000 000500 017000
00070: 031760 127552 000000 000440 000000 000000 000000 000000
00100: SAME: TO 000200-1

*T RECORD 356 (%544, #164)
00000: 036000 060156 172076 002332 000000 017340 033760 000000
00010: 000514 017000 000000 031760 127554 000440 017340 033760
00020: 000000 000000 000515 017000 031760 127556 000000 000440
00030: 017340 033760 000000 000516 000000 017000 031260 000000
00040: 000440 017000 000000 035460 006172 020441 005002 001740
00050: 000000 000000 144440 017035 031760 000000 000000 003500
00060: 017010 001561 130503 000440 000000 017340 030760 000377
00070: 000440 017000 000000 031760 000000 000000 000000 000000
00100: SAME: TO 000200-1

*T RECORD 357 (%545, #165)
00000: 036000 060156 167420 002410 000000 000000 000500 017034
00010: 167770 034001 000000 006012 040660 000000 000500 017000
```

123

```
00020: 000000 111660 000347 000440 017000 041260 000000 006021
00030: 020440 005030 111660 000305 000000 000440 017000 031460
00040: 006021 020040 000000 005000 111660 000331 000440 017000
00050: 000000 031460 006024 120040 005000 031760 000000 127560
00060: 000440 017360 043574 077776 000000 000454 017030 031760
00070: 127552 000440 000000 017360 000000 000000 000000 000000
00100: SAME: TO 000200-1

*T RECORD 358 (%546, #166)
00000: 036000 060156 055350 002466 000000 031760 130115 000440
00010: 017340 111660 000000 000347 000440 017000 111560 006031
00020: 000000 120500 005000 031460 006031 120040 000000 005000
00030: 027153 034001 006030 030760 000000 000305 000440 017000
00040: 031460 000000 000000 000440 017030 031760 130115 000440
00050: 000000 017360 041574 000001 000440 017000 000000 023160
00060: 006243 120440 005000 021760 000000 130137 000440 017300
00070: 033760 100000 000000 000441 000000 000000 000000 000000
00100: SAME: TO 000200-1

*T RECORD 359 (%547, #167)
00000: 036000 060156 005452 002544 000000 017000 033760 000377
00010: 000457 017140 000000 043577 000000 000500 017000 121060
00020: 000000 006046 020440 005000 061561 006037 000000 120500
00030: 005030 031460 006046 014040 000000 005060 001561 000000
00040: 002500 017034 000000 040577 000000 000500 017000 056577
00050: 000000 034001 006046 031260 000000 000440 000000 017030
00060: 031760 130113 000440 017360 000000 111660 000200 000440
00070: 017000 031460 000000 006062 000000 000000 000000 000000
00100: SAME: TO 000200-1

*T RECORD 360 (%550, #168)
00000: 036000 060156 113434 002622 000000 014040 005000 111660
00010: 000240 000440 000000 017000 031460 006127 014040 005000
00020: 000000 031760 000233 000440 017030 041574 000000 040000
00030: 000440 017000 006100 006260 000000 120040 002000 031760
00040: 000246 000440 000000 017030 111660 000144 000440 017000
00050: 000000 031460 006260 020040 006000 041576 000000 000100
00060: 000440 017000 031460 006100 000000 120040 005000 177441
00070: 034001 006064 000000 041660 000000 000000 000000 000000
00100: SAME: TO 000200-1

*T RECORD 361 (%551, #169)
00000: 036000 060156 162055 002700 000000 000177 000440 017030
00010: 031460 006260 000000 000040 006000 111660 000015 000440
00020: 000000 017000 031460 006073 120040 005000 000000 041575
00030: 000020 000440 017000 031760 000000 000012 000040 017030
00040: 031460 006260 000000 120040 006000 031760 130114 000440
00050: 000000 017340 031760 000000 000500 017000 000000 006243
00060: 006100 020040 001000 041575 000000 000002 000440 017000
00070: 031460 006243 000000 120040 000000 000000 000000 000000
00100: SAME: TO 000200-1

*T RECORD 362 (%552, #16A)
00000: 036000 060156 126143 002756 000000 005000 033760 100033
00010: 000440 017000 000000 041660 000200 000440 017000 011136
00020: 000000 034001 006102 006110 005702 120040 000000 002000
00030: 031760 130113 000440 017340 000000 033760 100046 000440
00040: 017000 030760 000000 000344 000440 017000 111660 000000
```

```
00050: 000000 000500 017000 031460 005702 020040 000000 006000
00060: 031760 130113 000440 017340 000000 033760 000000 000500
00070: 017000 043560 000000 000177 000000 000000 000000 000000
00100: SAME: TO 000200-1


*T RECORD 363 (%553, #16B)
00000: 036000 060156 057570 003034 000000 000440 017000 003560
00010: 100000 000440 000000 017000 031460 005702 000040 006000
00020: 000000 031760 130113 000440 017340 030760 000000 000015
00030: 000440 017000 121660 000000 000000 000500 017000 160067
00040: 034001 006120 000000 031460 006126 120040 005000 031760
00050: 000000 127554 000440 017340 030760 000020 000000 000440
00060: 017000 033760 100012 000440 000000 017000 041660 000000
00070: 000500 017000 000000 031460 000000 000000 000000 000000
00100: SAME: TO 000200-1


*T RECORD 364 (%554, #16C)
00000: 036000 060156 056375 003112 000000 005702 120040 006000
00010: 031460 006243 000000 000040 016000 111660 000237 000440
00020: 000000 017000 031460 006134 120040 005000 000000 031760
00030: 000400 000440 017030 031460 000000 006262 000040 006000
00040: 031460 006243 000000 000040 016000 041576 000100 000440
00050: 000000 017000 031460 006243 120040 005000 000000 130612
00060: 034001 006136 031760 127506 000000 000440 017340 031760
00070: 127510 000440 000000 017360 000000 000000 000000 000000
00100: SAME: TO 000200-1


*T RECORD 365 (%555, #16D)
00000: 036000 060156 122514 003170 000000 111660 000201 003440
00010: 017037 031760 000000 130111 000440 017360 033760 011634
00020: 000000 000517 006000 030760 000007 000440 000000 017000
00030: 006146 011650 114040 002000 000000 010260 006144 000440
00040: 016000 031760 000000 130112 000440 017360 111577 000116
00050: 000000 000440 017000 041575 000010 122440 000000 017000
00060: 006153 006153 020042 001000 000000 031760 000162 000440
00070: 017070 111577 000000 000114 000000 000000 000000 000000
00100: SAME: TO 000200-1


*T RECORD 366 (%556, #16E)
00000: 036000 060156 124002 003246 000000 000440 017000 070142
00010: 034001 006154 000000 031460 006172 020040 005000 030760
00020: 000000 000400 000440 017000 033760 000010 000000 000440
00030: 017000 033760 004000 000441 000000 017000 111577 000116
00040: 000440 017000 000000 041175 006163 020440 005000 051174
00050: 000000 006165 020441 005000 031460 006165 000000 120040
00060: 005000 030760 001000 000440 000000 017000 031760 100000
00070: 000440 017030 000000 031760 000000 000000 000000 000000
00100: SAME: TO 000200-1


*T RECORD 367 (%557, #16F)
00000: 036000 060156 054635 003324 000000 130103 000440 017360
00010: 001660 000002 000000 000440 017030 031760 127670 000440
00020: 000000 017360 041260 006243 000440 016170 000000 156513
00030: 034001 006172 041260 000000 000000 000440 017030 031760
00040: 130103 000440 000000 017360 031760 127506 000440 017340
00050: 000000 031760 127510 000440 017360 031760 000000 130111
00060: 000440 017340 103760 011634 000000 000517 006000 031460
00070: 011650 000040 000000 006000 000000 000000 000000 000000
```

125

```
00100: SAME: TO 000200-1

*T RECORD 368 (%560, #170)
00000: 036000 060156 040714 003402 000000 031460 011650 000040
00010: 006000 041576 000000 000002 000440 017000 031460 006237
00020: 000000 120040 005000 031760 130112 000440 000000 017340
00030: 030760 000114 000440 017000 000000 121660 000000 000500
00040: 017000 031477 000000 006217 020440 005030 116102 034001
00050: 000000 006210 031460 006260 000040 006000 000000 031760
00060: 130114 000440 017340 030760 000000 000002 000440 017000
00070: 031760 000000 000000 000500 000000 000000 000000 000000
00100: SAME: TO 000200-1

*T RECORD 369 (%561, #171)
00000: 036000 060156 005150 003460 000000 017000 006236 006217
00010: 020040 001000 000000 041075 000000 000440 017000 031460
00020: 000000 006236 120040 005000 031760 130104 000000 000440
00030: 017300 031460 000000 000440 000000 017070 031461 000000
00040: 000440 017170 000000 031460 000000 000040 017000 031475
00050: 000000 000000 000440 017170 031476 000000 000000 000440
00060: 017170 033577 100000 000440 000000 017000 177235 034001
00070: 006226 041577 000000 000200 000000 000000 000000 000000
00100: SAME: TO 000200-1

*T RECORD 370 (%562, #172)
00000: 036000 060156 014735 003536 000000 000440 017000 031460
00010: 005702 020040 000000 006000 031760 130104 000440 017340
00020: 000000 033760 000000 000500 017140 033760 000000 000000
00030: 000501 017140 031460 000000 000000 000040 017000 033760
00040: 000000 000515 000000 017140 033760 000000 000516 017000
00050: 000000 031460 006201 000040 016000 031760 000000 130112
00060: 000440 017340 030760 000124 000000 000440 017000 121660
00070: 000000 000500 000000 017000 000000 000000 000000 000000
00100: SAME: TO 000200-1

*T RECORD 371 (%563, #173)
00000: 036000 060156 040271 003614 000000 031460 006244 020040
00010: 006000 031460 000000 000000 000040 007000 127752 000400
00020: 000000 130103 000000 130103 002400 130111 000000 000000
00030: 000000 000000 000001 000000 000000 130112 030001 006244
00040: 031760 127552 000000 000440 017340 033760 000000 000514
00050: 000000 017000 031760 127554 000440 017340 000000 033760
00060: 000000 000515 017000 041575 000000 000010 000440 017000
00070: 031460 006256 000000 020040 000000 000000 000000 000000
00100: SAME: TO 000200-1

*T RECORD 372 (%564, #174)
00000: 036000 060156 025645 003672 000000 005000 031760 000036
00010: 000440 017030 000000 041574 004000 000440 017000 006256
00020: 000000 006260 120040 002000 031460 006257 000000 000040
00030: 016000 031460 006303 000040 000000 006000 031460 000000
00040: 000040 007000 000000 171470 034001 006260 041576 000100
00050: 000000 000440 017000 031460 006302 120040 000000 005000
00060: 031460 000000 000120 015000 000000 031462 000000 000500
00070: 015300 031460 000000 000000 000000 000000 000000 000000
00100: SAME: TO 000200-1

*T RECORD 373 (%565, #175)
```

126

```
00000: 036000 060156 140667 003750 000000 000520 015300 031460
00010: 000000 000120 000000 015000 033760 000000 000500 017000
00020: 000000 031460 001021 000040 006000 031460 000000 000000
00030: 000100 037330 031460 000000 000000 000100 015000 033560
00040: 140000 000440 000000 017000 031460 001427 000040 006000
00050: 000000 031460 000000 000040 011000 031460 000000 000000
00060: 000000 031320 167642 012001 000000 006276 033760 000000
00070: 000400 011000 000000 033760 000000 000000 000000 000000
00100: SAME: TO 000200-1

*T RECORD 374 (%566, #176)
00000: 036000 060156 013776 004026 000000 000000 000402 011000
00010: 031760 000000 000000 000400 011030 031760 000000 000400
00020: 000000 017300 031460 000000 000040 007000 000000 077250
00030: 024001 006303 031760 127554 000000 000440 017340 033760
00040: 000200 000455 000000 017000 031760 000000 003500 017035
00050: 000000 043575 000000 000515 017000 031575 000000 000015
00060: 000440 017030 031460 006260 000000 000040 006000 031760
00070: 000012 000440 000000 017030 000000 000000 000000 000000
00100: SAME: TO 000200-1

*T RECORD 375 (%567, #177)
00000: 036000 060156 120117 004104 000000 031475 000000 000440
00010: 017000 031460 000000 006260 120040 006000 031460 000000
00020: 000000 000040 007000 114564 034001 006315 000000 031460
00030: 000000 000040 017000 031760 000000 127552 000440 017340
00040: 111560 000040 000000 000440 017000 031760 006322 140500
00050: 000000 005000 031460 006331 114040 005000 000000 031460
00060: 011023 000040 006000 111560 000000 000015 000440 017000
00070: 031460 006331 000000 120040 000000 000000 000000 000000
00100: SAME: TO 000200-1

*T RECORD 376 (%570, #178)
00000: 036000 060156 135763 004162 000000 005000 041576 000100
00010: 000440 017000 000000 006331 006467 020040 002000 031460
00020: 000000 006455 000040 006000 031460 006343 000000 000040
00030: 016000 031760 127552 000440 000000 017340 111560 000033
00040: 000440 017000 000000 170076 020001 006333 031760 006340
00050: 000000 020500 005000 031460 006342 014440 000000 005000
00060: 031460 006342 020040 005000 000000 111560 000040 000440
00070: 017000 031460 000000 006342 000000 000000 000000 000000
00100: SAME: TO 000200-1

*T RECORD 377 (%571, #179)
00000: 036000 060156 032161 004240 000000 140040 005000 031760
00010: 127560 001440 000000 017300 031460 005766 000440 006070
00020: 000000 031460 000000 000040 007000 113077 000000 034001
00030: 006343 031460 000000 005040 000000 017000 031460 000000
00040: 000040 007000 000000 031760 001007 000440 017340 031760
00050: 000000 000000 000500 017000 031460 006343 000000 020040
00060: 005000 031460 000000 000040 000000 037150 033760 001440
00070: 000440 017000 000000 013460 000000 000000 000000 000000
00100: SAME: TO 000200-1

*T RECORD 378 (%572, #17A)
00000: 036000 060156 115657 004316 000000 006352 120440 005000
00010: 031760 000106 000000 000440 017030 031760 110000 004440
00020: 000000 017760 033760 001440 000440 017000 000000 013460
```

```
00030: 006356 120440 005000 031460 000000 000000 000040 037170
00040: 031460 006343 000000 000040 016000 107726 010001 006361
00050: 000000 031760 127524 000440 017340 021760 000000 000000
00060: 000500 017070 031460 006343 000000 114040 005000 041260
00070: 006343 000440 000000 016070 000000 000000 000000 000000
00100: SAME: TO 000200-1
```

*T RECORD 379 (%573, #17B)
```
00000: 036000 060156 044215 004374 000000 121273 034001 006365
00010: 031460 006367 000000 005040 016000 031460 000000 001040
00020: 000000 017000 031760 127526 000440 017340 000000 033760
00030: 000000 000511 017000 031760 000000 127524 000440 017340
00040: 033760 000000 000000 000512 017000 041576 000300 000440
00050: 000000 017000 006402 011312 120040 002000 000000 031460
00060: 011305 154040 006000 031760 000000 127526 000440 017300
00070: 031471 000000 000000 000440 000000 000000 000000 000000
00100: SAME: TO 000200-1
```

*T RECORD 380 (%574, #17C)
```
00000: 036000 060156 161656 004452 000000 017070 031760 127524
00010: 000440 017300 000000 031472 006430 000440 016070 031760
00020: 000000 127520 000440 017340 103255 034001 000000 006403
00030: 121572 000000 000500 017000 000000 031460 006406 014040
00040: 005000 033760 000000 000000 000512 017000 031760 127516
00050: 000000 000440 017340 111572 000000 000500 000000 017000
00060: 031460 006412 014040 005000 000000 033760 000000 000512
00070: 017000 031460 000000 006431 000000 000000 000000 000000
00100: SAME: TO 000200-1
```

*T RECORD 381 (%575, #17D)
```
00000: 036000 060156 034311 004530 000000 000040 006000 031472
00010: 006416 154440 000000 005030 031760 127524 000440 017360
00020: 000000 031460 006430 000040 016000 031760 000000 127520
00030: 000440 017340 031760 127516 000000 000440 017300 033760
00040: 006422 150512 000000 005040 167510 020001 006421 033760
00050: 000000 000000 000512 017000 031460 006431 000000 000040
00060: 006000 031760 127520 000440 000000 017340 031460 006426
00070: 154040 005000 000000 031472 000000 000000 000000 000000
00100: SAME: TO 000200-1
```

*T RECORD 382 (%576, #17E)
```
00000: 036000 060156 076320 004606 000000 000000 000440 017030
00010: 031760 127524 000000 000440 017360 031460 006457 000040
00020: 000000 006000 031460 006343 000040 016000 000000 152322
00030: 034001 006431 007700 000000 000000 000457 017000 010477
00040: 000000 006440 000000 017000 031760 127476 000440 017340
00050: 000000 123072 006454 054452 005000 121572 000000 006454
00060: 014500 005000 031472 006454 000000 021440 005034 033760
00070: 007777 000457 000000 017000 000000 000000 000000 000000
00100: SAME: TO 000200-1
```

*T RECORD 383 (%577, #17F)
```
00000: 036000 060156 156405 004664 000000 041577 000000 003420
00010: 017010 033760 000000 170000 000457 017000 043577 000000
00020: 000000 000517 017000 001577 000000 003420 000000 017010
00030: 041572 000360 001440 017034 000000 037760 000000 000517
00040: 017000 001577 000000 127540 000440 017340 010652 014001
00050: 000000 006447 031760 100000 000440 017304 000000 033760
```

```
00060: 000000 000537 017000 041577 000000 000000 000500 017000
00070: 031460 000000 000000 122040 000000 000000 000000 000000
00100: SAME: TO 000200-1
```

*T RECORD 384 (%600, #180)
```
00000: 036000 060156 111042 004742 000000 017000 031460 006433
00010: 154040 005000 000000 031460 000000 000040 007000 172024
00020: 000000 024001 006455 031460 006457 005040 000000 016000
00030: 031460 000000 001040 017000 000000 035400 006657 000440
00040: 006002 031460 000000 006466 154440 005000 031460 000000
00050: 000000 115040 017000 031460 006657 000040 000000 006000
00060: 031460 000000 000440 017000 000000 041576 000020 015440
00070: 017000 031460 000000 007462 000000 000000 000000 000000
00100: SAME: TO 000200-1
```

*T RECORD 385 (%601, #181)
```
00000: 036000 060156 116357 005020 000000 020040 006000 031460
00010: 006343 000040 000000 016000 011125 034001 006467 031760
00020: 000000 127520 000440 017340 031760 127524 000000 000440
00030: 017360 041576 000300 000440 000000 017000 031460 006474
00040: 020040 005000 000000 041260 000000 000440 017070 031460
00050: 000000 006343 000040 016000 031760 127522 000000 000440
00060: 017340 030760 000370 000440 000000 017000 041576 000100
00070: 000440 017000 000000 003660 000000 000000 000000 000000
00100: SAME: TO 000200-1
```

*T RECORD 386 (%602, #182)
```
00000: 036000 060156 016007 005076 000000 011023 020500 006000
00010: 031460 006343 000000 000040 016000 033760 000370 000440
00020: 000000 017000 041576 000100 000440 017000 000000 031460
00030: 011023 020040 006000 023627 000000 016001 006505 031460
00040: 006343 000040 000000 016000 031760 127552 000440 017340
00050: 000000 070760 000100 000440 017000 041660 000000 000000
00060: 000500 007070 031760 127552 000000 000440 017340 030760
00070: 000100 000440 000000 017000 000000 000000 000000 000000
00100: SAME: TO 000200-1
```

*T RECORD 387 (%603, #183)
```
00000: 036000 060156 113763 005154 000000 031660 006343 000500
00010: 016070 001777 000000 034001 006514 031760 127552 000440
00020: 000000 017340 031760 006527 050500 005000 000000 006517
00030: 011023 014040 002000 031760 000000 127552 000440 017340
00040: 111560 000040 000000 000440 017000 031760 006527 040500
00050: 000000 005000 031460 006525 114440 005030 000000 111560
00060: 000132 000440 017000 031460 000000 006527 120040 005000
00070: 031760 127560 000000 001440 000000 000000 000000 000000
00100: SAME: TO 000200-1
```

*T RECORD 388 (%604, #184)
```
00000: 036000 060156 062104 005232 000000 017360 031460 005766
00010: 000040 006000 000000 031460 000000 000040 007000 031460
00020: 000000 011023 000040 006000 031460 006343 000000 000040
00030: 016000 166052 034001 006532 000000 040260 006547 050440
00040: 005030 031760 000000 127562 000440 017360 031760 127564
00050: 000000 000440 017360 031760 127566 000440 000000 017360
00060: 031760 127570 000440 017360 000000 031760 127572 000440
00070: 017360 001660 000000 130116 000000 000000 000000 000000
00100: SAME: TO 000200-1
```

```
*T RECORD 389 (%605, #185)
00000: 036000 060156 155100 005310 000000 000440 017340 031760
00010: 000000 000500 000000 017000 111560 006547 020500 005000
00020: 000000 100260 006540 120440 005000 000660 000000 000177
00030: 001440 017030 031760 127560 000000 000440 017360 031460
00040: 005766 000040 000000 006000 031460 000000 000040 007000
00050: 000000 123731 005000 130116 000141 000142 000000 000143
00060: 000144 000146 000147 000153 000000 000160 000163 177777
00070: 131762 016001 000000 006550 000000 000000 000000 000000
00100: SAME: TO 000200-1

*T RECORD 390 (%606, #186)
00000: 036000 060156 152121 005366 000000 031460 006556 050040
00010: 005000 111560 000000 000100 000440 017030 031460 006556
00020: 000000 014040 005000 121560 000103 000440 000000 017000
00030: 031460 006556 014040 005000 000000 031760 127522 000440
00040: 017360 031460 000000 000000 000040 007000 023777 032001
00050: 000000 006557 031760 127524 000440 017340 000000 031760
00060: 000000 001500 017034 031760 000000 000000 003500 017010
00070: 030760 000017 000000 000440 000000 000000 000000 000000
00100: SAME: TO 000200-1

*T RECORD 391 (%607, #187)
00000: 036000 060156 076325 005444 000000 017000 047660 000000
00010: 000517 017000 000000 001577 127540 000440 017300 030760
00020: 000000 100000 000440 017000 031260 000000 000000 000440
00030: 017034 030760 000000 000500 000000 017040 041576 000100
00040: 000440 017000 000000 031660 006573 120500 005030 031460
00050: 000000 000000 000040 017060 031460 006343 000000 000040
00060: 016000 141564 034001 006574 000000 031760 127524 000440
00070: 017340 031760 000000 000000 000000 000000 000000 000000
00100: SAME: TO 000200-1

*T RECORD 392 (%610, #188)
00000: 036000 060156 175235 005522 000000 001500 017034 031760
00010: 000000 003500 000000 017010 030760 000017 000440 017000
00020: 000000 047660 000000 000517 017000 001577 000000 127540
00030: 000440 017300 030760 077777 000000 000440 017000 031260
00040: 000000 000440 000000 017034 030760 000000 000500 017040
00050: 000000 041576 000100 000440 017000 041660 000000 006610
00060: 120500 005030 031460 000000 000000 000040 017060 031460
00070: 006343 000040 000000 016000 000000 000000 000000 000000
00100: SAME: TO 000200-1

*T RECORD 393 (%611, #189)
00000: 036000 060156 042444 005600 000000 041576 000300 000440
00010: 017000 033353 000000 016001 006612 041260 006343 120440
00020: 000000 005030 031760 127540 000440 017360 000000 031760
00030: 127542 000440 017360 031760 000000 127544 000440 017360
00040: 031760 127546 000000 000440 017360 031760 127550 000440
00050: 000000 017360 031460 006343 000040 016000 000000 072574
00060: 022001 006621 031760 127516 000000 000440 017340 031760
00070: 127524 000440 000000 017300 000000 000000 000000 000000
00100: SAME: TO 000200-1

*T RECORD 394 (%612, #18A)
00000: 036000 060156 023522 005656 000000 041576 000300 000440
```

```
00010: 017000 020760 000000 006631 120500 005040 121660 000000
00020: 000000 000500 017000 031460 006630 014040 000000 005000
00030: 031260 000000 000440 017030 000000 031760 127520 000440
00040: 017360 031460 000000 006343 000040 016000 024575 022001
00050: 000000 006632 031760 127520 000440 017340 000000 031760
00060: 127524 000440 017300 041576 000000 000300 000440 017000
00070: 030760 006642 000000 120500 000000 000000 000000 000000
00100: SAME: TO 000200-1

*T RECORD 395 (%613, #18B)
00000: 036000 060156 112326 005734 000000 005040 111660 000000
00010: 000500 017000 000000 101760 006641 014500 005030 101260
00020: 000000 000000 000440 017030 031760 127516 000000 000440
00030: 017360 031460 006343 000040 000000 016000 145620 022001
00040: 006643 031760 000000 130130 000440 017340 041576 000300
00050: 000000 000440 017000 031460 006653 120040 000000 005000
00060: 120560 000000 000500 017000 000000 041660 000377 000440
00070: 017000 031460 000000 006646 000000 000000 000000 000000
00100: SAME: TO 000200-1

*T RECORD 396 (%614, #18C)
00000: 036000 060156 101037 006012 000000 120040 005140 031260
00010: 000000 002440 000000 017034 033760 011023 000500 006000
00020: 000000 031460 006343 000040 016000 074573 000000 003000
00030: 130130 173066 172467 172070 000000 170135 170533 171173
00040: 062060 002001 000000 006654 031460 006343 000040 016000
00050: 000000 064737 032001 006655 031460 006657 000000 001040
00060: 016000 031460 000000 005040 000000 017000 007700 000000
00070: 000457 017000 000000 013477 000000 000000 000000 000000
00100: SAME: TO 000200-1

*T RECORD 397 (%615, #18D)
00000: 036000 060156 011207 006070 000000 000000 000457 017000
00010: 031760 127500 000000 000440 017340 030760 000000 006500
00020: 000000 017000 031760 127526 000440 017340 000000 121577
00030: 000000 000500 017070 111660 000000 006667 114500 005000
00040: 011260 006671 000000 002440 016070 031460 006671 120040
00050: 000000 005000 041260 000000 002440 017070 000000 031460
00060: 006343 000040 016000 103642 000000 034001 006672 031460
00070: 006674 001040 000000 016000 000000 000000 000000 000000
00100: SAME: TO 000200-1

*T RECORD 398 (%616, #18E)
00000: 036000 060156 066231 006146 000000 031460 000000 005040
00010: 017000 007700 000000 000000 000457 017000 013477 000000
00020: 000000 000457 017000 031760 127476 000440 000000 017340
00030: 030760 000000 006500 017000 000000 031760 127524 000440
00040: 017340 121577 000000 000000 000500 017070 111660 006704
00050: 000000 114500 005000 011260 006706 002440 000000 016070
00060: 031460 006706 120040 005000 000000 041260 000000 002440
00070: 017070 031460 000000 006657 000000 000000 000000 000000
00100: SAME: TO 000200-1

*T RECORD 399 (%617, #18F)
00000: 036000 060156 114265 006224 000000 054040 006000 031460
00010: 006343 000040 000000 016000 026336 034001 006710 031760
00020: 000000 127502 000440 017340 033760 000000 000000 000500
00030: 017000 031760 127514 000440 000000 017340 033760 000000
```

131

EP 0 455 351 A2

```
00040: 000501 017000 000000 031760 127504 000440 017360 001561
00050: 000000 000007 000440 017300 013460 000000 000000 000440
00060: 017000 031460 006723 014040 000000 005000 103760 006722
00070: 120521 005030 000000 041260 000000 000000 000000 000000
00100: SAME: TO 000200-1


*T RECORD 400 (%620, #190)
00000: 036000 060156 064312 006302 000000 000000 000440 017030
00010: 031460 006715 000000 000040 016060 031460 012036 000040
00020: 000000 006000 031760 127510 000440 017360 000000 031760
00030: 000000 000500 017300 026654 000000 034001 006726 041260
00040: 000000 000440 000000 017070 031460 000000 000040 017160
00050: 000000 021760 000000 000440 017170 041260 000000 000000
00060: 000440 017030 031760 130136 000000 000440 017360 031760
00070: 127526 000440 000000 017360 000000 000000 000000 000000
00100: SAME: TO 000200-1


*T RECORD 401 (%621, #191)
00000: 036000 060156 041363 006360 000000 031760 127524 000440
00010: 017360 031760 000000 127532 000440 017360 031760 127530
00020: 000000 000440 017360 031760 127536 000440 000000 017360
00030: 031760 127522 000440 017360 000000 031760 127520 000440
00040: 017360 031760 000000 127552 000440 017360 031760 127554
00050: 000000 000440 017360 104636 034001 006744 000000 031760
00060: 127540 000440 017360 031760 000000 127542 000440 017360
00070: 031760 127544 000000 000440 000000 000000 000000 000000
00100: SAME: TO 000200-1


*T RECORD 402 (%622, #192)
00000: 036000 060156 152360 006436 000000 017360 031760 127546
00010: 000440 017360 000000 031760 127550 000440 017360 031760
00020: 000000 000003 000440 017030 031760 127534 000000 000440
00030: 017360 031760 127476 000440 000000 017340 031760 127516
00040: 000440 017360 000000 031760 127576 000440 017340 033760
00050: 000000 000000 000517 017000 031760 127510 000000 000440
00060: 017340 031477 000000 000440 000000 017360 031760 127500
00070: 000440 017340 000000 030077 000000 000000 000000 000000
00100: SAME: TO 000200-1


*T RECORD 403 (%623, #193)
00000: 036000 060156 007715 006514 000000 034001 006762 020760
00010: 000000 000500 000000 017000 043576 000020 000056 017030
00020: 000000 031760 127556 000040 017360 031760 000000 000000
00030: 001100 017034 021760 000000 000000 000100 017030 031477
00040: 006772 020040 000000 005300 010260 000000 000440 017000
00050: 000000 010260 006771 120440 005160 041576 000000 000020
00060: 000440 017000 031477 007052 000000 120440 005300 043260
00070: 000000 000441 000000 017060 000000 000000 000000 000000
00100: SAME: TO 000200-1


*T RECORD 404 (%624, #194)
00000: 036000 060156 036622 006572 000000 103760 000000 000440
00010: 017000 111560 000000 000011 000440 017000 007025 012036
00020: 000000 120040 002000 105016 034001 007000 000000 031260
00030: 000000 000440 017300 031461 000000 000000 000440 017070
00040: 031260 007004 000000 020440 005030 101461 007005 000440
00050: 000000 016360 031760 127506 000440 017360 000000 101260
00060: 000000 000440 017300 041260 000000 000000 000440 017070
```

132

```
00070: 031760 161146 000000 000440 000000 000000 000000 000000
00100: SAME: TO 000200-1

*T RECORD 405 (%625, #195)
00000: 036000 060156 065135 006650 000000 017170 001560 160060
00010: 002440 017174 000000 031760 020361 000440 017170 031760
00020: 000000 173524 000440 017170 031760 170377 000000 000440
00030: 017170 033260 012036 000441 000000 006000 101461 000000
00040: 000440 017360 000000 011137 034001 007016 031260 000000
00050: 000000 000440 017300 031461 000000 000440 000000 017070
00060: 041260 000000 000440 017170 000000 031760 170440 000440
00070: 017170 031760 000000 177440 000000 000000 000000 000000
00100: SAME: TO 000200-1

*T RECORD 406 (%626, #196)
00000: 036000 060156 101270 006726 000000 002440 017174 033260
00010: 000000 000441 000000 017000 103460 006776 000440 016000
00020: 000000 031760 130136 000440 017340 101760 000000 000000
00030: 000500 017070 025760 000000 000000 000500 017003 001560
00040: 146256 045440 000000 017340 031460 007033 050040 005000
00050: 000000 031760 000000 002500 017034 033760 000000 000377
00060: 000440 017000 030257 034001 000000 007034 043560 000000
00070: 000500 017000 000000 111560 000000 000000 000000 000000
00100: SAME: TO 000200-1

*T RECORD 407 (%627, #197)
00000: 036000 060156 040572 007004 000000 000377 000440 017000
00010: 007040 011023 000000 120040 002000 031460 007025 000040
00020: 000000 016000 021760 130137 000440 017300 000000 030760
00030: 077777 000440 017140 041660 000000 000000 000500 017070
00040: 031460 007041 000000 120040 005000 030760 000001 000440
00050: 000000 017000 031460 012222 000040 006000 000000 030760
00060: 000002 000440 017000 031460 000000 012222 000040 006000
00070: 030760 000003 000000 000440 000000 000000 000000 000000
00100: SAME: TO 000200-1

*T RECORD 408 (%630, #198)
00000: 036000 060156 162625 007062 000000 017000 031460 012222
00010: 000040 006000 000000 046446 002001 007052 031460 007771
00020: 000000 000040 016000 066563 004000 130136 000000 000000
00030: 065752 051321 051316 055331 000000 055371 066754 000000
00040: 162645 032001 000000 007053 031760 127520 000440 017340
00050: 000000 031760 127524 000440 017360 043260 000000 000000
00060: 000442 017000 031760 127512 000000 000440 017340 031760
00070: 000000 000500 000000 017300 000000 000000 000000 000000
00100: SAME: TO 000200-1

*T RECORD 409 (%631, #199)
00000: 036000 060156 034417 007140 000000 103462 007057 120442
00010: 005140 013462 000000 000000 000442 017000 031760 127500
00020: 000000 000440 017340 121562 000000 000500 000000 017000
00030: 007066 007460 040040 002000 000000 031460 007061 000040
00040: 016000 031760 000000 127526 000440 017300 031462 006343
00050: 000000 000440 016070 027156 022001 007070 000000 041576
00060: 000300 000440 017000 007076 000000 011305 120040 002000
00070: 031760 127526 000000 000440 000000 000000 000000 000000
00100: SAME: TO 000200-1
```

```
*T RECORD 410 (%632, #19A)
00000: 036000 060156 112017 007216 000000 017300 031471 000000
00010: 000440 017070 000000 031760 127524 000440 017300 031472
00020: 000000 007100 000440 016070 031460 007466 000000 000040
00030: 006000 031460 007076 054040 000000 005000 031460 006343
00040: 000040 016000 000000 036255 034001 007101 041576 000100
00050: 000000 000440 017000 031460 007154 120040 000000 005000
00060: 041576 000200 000440 017000 000000 031460 007126 120040
00070: 005000 031760 000000 127510 000000 000000 000000 000000
00100: SAME: TO 000200-1

*T RECORD 411 (%633, #19B)
00000: 036000 060156 063775 007274 000000 000440 017340 033760
00010: 000000 000517 000000 017000 031760 127526 000440 017340
00020: 000000 030760 000000 000500 017000 010260 000000 000000
00030: 000440 017000 031477 007115 000000 014440 005300 031460
00040: 007115 020040 000000 005140 033760 007111 000517 016000
00050: 000000 101477 007125 020440 005340 033760 000000 000000
00060: 000500 017000 152021 034001 000000 007117 041260 000000
00070: 000440 017070 000000 033460 000000 000000 000000 000000
00100: SAME: TO 000200-1

*T RECORD 412 (%634, #19C)
00000: 036000 060156 000567 007352 000000 000000 000457 017300
00010: 031460 007125 000000 020040 005140 033760 000000 000500
00020: 000000 017000 031477 012117 000440 006030 000000 031460
00030: 007120 000040 016000 031460 000000 007153 000040 016000
00040: 031760 127524 000000 000440 017340 033760 000000 000512
00050: 000000 017000 031760 130146 000440 017360 000000 031760
00060: 127526 000440 017340 033760 000000 000000 000511 017000
00070: 031760 130147 000000 000440 000000 000000 000000 000000
00100: SAME: TO 000200-1

*T RECORD 413 (%635, #19D)
00000: 036000 060156 125665 007430 000000 017360 043260 000000
00010: 005450 017000 000000 144156 034001 007135 031460 011312
00020: 000000 000040 006000 031471 000000 000440 000000 017030
00030: 031760 127526 000440 017360 000000 031472 000000 000440
00040: 017030 031760 000000 127524 000440 017360 007144 007155
00050: 000000 054040 002000 003175 007135 005450 000000 016000
00060: 031760 130146 000440 017340 000000 031760 127524 000440
00070: 017360 031760 000000 130147 000000 000000 000000 000000
00100: SAME: TO 000200-1

*T RECORD 414 (%636, #19E)
00000: 036000 060156 137113 007506 000000 000440 017340 031760
00010: 127526 000440 000000 017360 013470 000000 000450 017000
00020: 000000 007153 007461 114040 002000 031460 000000 007150
00030: 000040 016000 017042 004001 000000 007153 031460 007155
00040: 000040 006000 000000 031460 006343 000040 016000 134133
00050: 000000 001000 130146 000000 000000 130146 000000 034001
00060: 007155 031760 127526 000440 000000 017340 041576 000300
00070: 001440 017306 000000 031760 000000 000000 000000 000000
00100: SAME: TO 000200-1

*T RECORD 415 (%637, #19F)
00000: 036000 060156 044605 007564 000000 007236 020520 005000
00010: 033760 007236 000000 044511 005000 033760 011634 000517
```

```
00020: 000000 006000 041576 000002 000440 017000 000000 033471
00030: 007242 120457 005000 123174 000000 011701 000454 006000
00040: 043260 000000 000000 006453 017000 041576 000001 000440
00050: 000000 017000 007217 011650 020040 002000 000000 031760
00060: 127524 000440 017340 110577 000000 000360 000440 017000
00070: 011260 007174 000000 120440 000000 000000 000000 000000
00100: SAME: TO 000200-1
```

```
*T RECORD 416 (%640, #1A0)
00000: 036000 060156 057323 007642 000000 005000 107552 034001
00010: 007173 031460 000000 000000 006040 017000 111573 007176
00020: 000000 120500 005000 031460 000000 042040 000000 017000
00030: 031460 007213 014040 005000 000000 031460 007213 154040
00040: 005000 031760 000000 127576 000440 017340 001571 000000
00050: 000000 000500 017300 111577 000200 000440 000000 017000
00060: 021160 007206 114440 005070 000000 033760 000040 000457
00070: 017000 031460 000000 007213 000000 000000 000000 000000
00100: SAME: TO 000200-1
```

```
*T RECORD 417 (%641, #1A1)
00000: 036000 060156 170504 007720 000000 000040 016000 040577
00010: 000360 000440 000000 017000 111660 000360 000440 017000
00020: 000000 031460 007212 120040 005000 035241 000000 034001
00030: 007211 103473 007213 000454 000000 016000 033760 000200
00040: 000457 017000 000000 111577 000200 000440 017000 003453
00050: 000000 000000 014453 017000 030477 011747 000000 000440
00060: 006000 031460 007166 000040 000000 016000 031760 127524
00070: 000440 017340 000000 031474 000000 000000 000000 000000
00100: SAME: TO 000200-1
```

```
*T RECORD 418 (%642, #1A2)
00000: 036000 060156 056711 007776 000000 007242 154440 005000
00010: 123173 007224 000000 120453 005000 033760 000000 000514
00020: 000000 017000 033471 011634 000457 006000 000000 033471
00030: 011701 000457 006000 041576 000000 000001 000440 017000
00040: 007242 011650 000000 020040 002000 171611 030001 007227
00050: 000000 121173 000000 000454 017000 031460 000000 007232
00060: 120040 005000 033760 000377 000000 000457 017000 111577
00070: 000200 000440 000000 017000 000000 000000 000000 000000
00100: SAME: TO 000200-1
```

```
*T RECORD 419 (%643, #1A3)
00000: 036000 060156 172766 010054 000000 003453 000000 014453
00010: 017000 030477 000000 011747 000440 006000 031460 007225
00020: 000000 000040 016000 031760 127476 000440 000000 017340
00030: 033760 000000 000514 017000 000000 007242 007335 114040
00040: 002000 013474 000000 007240 000454 016000 031460 006343
00050: 000000 000040 016000 064452 034001 007243 000000 041576
00060: 000300 000440 017000 031460 000000 007265 120040 005000
00070: 031760 127526 000000 000440 000000 000000 000000 000000
00100: SAME: TO 000200-1
```

```
*T RECORD 420 (%644, #1A4)
00000: 036000 060156 102072 010132 000000 017340 033760 011634
00010: 000517 006000 000000 041576 000002 000440 017000 031460
00020: 000000 007265 120440 005340 033760 012036 000000 000501
00030: 006000 031461 007265 050440 000000 005300 031460 007255
00040: 120040 005000 000000 021760 127510 000440 017300 031460
```

```
00050: 000000 000000 000040 017160 031460 000000 000000 000440
00060: 017360 031260 000000 000440 000000 017300 031461 000000
00070: 000440 017070 000000 025357 000000 000000 000000 000000
00100: SAME: TO 000200-1

*T RECORD 421 (%645, #1A5)
00000: 036000 060156 072601 010210 000000 012001 007261 031460
00010: 000000 000440 000000 017170 021760 000000 000440 017170
00020: 000000 031760 127520 000440 017340 031760 000000 127524
00030: 000440 017360 031460 006343 000000 000040 016000 003710
00040: 034001 007266 000000 031760 127526 000440 017340 033760
00050: 000000 000000 000517 017000 041576 000300 000000 000440
00060: 017000 007324 011634 020040 000000 002000 041576 000002
00070: 000440 017000 000000 031460 000000 000000 000000 000000
00100: SAME: TO 000200-1

*T RECORD 422 (%646, #1A6)
00000: 036000 060156 147064 010266 000000 007322 120440 005340
00010: 033760 000000 000000 000504 017140 033760 000000 000505
00020: 000000 017300 031464 007300 020440 005030 000000 031460
00030: 000000 000040 017060 031465 000000 007302 020440 005030
00040: 101464 000000 000000 000440 017360 031460 012117 000440
00050: 000000 006030 031760 127526 000440 017340 000000 035160
00060: 034001 007304 031760 000000 000000 005500 017000 031465
00070: 007307 120440 000000 005030 000000 000000 000000 000000
00100: SAME: TO 000200-1

*T RECORD 423 (%647, #1A7)
00000: 036000 060156 122614 010344 000000 031760 127510 021440
00010: 017360 007322 000000 012036 050040 002000 031760 127510
00020: 000000 000440 017360 031464 000000 000440 000000 017300
00030: 031460 007314 020040 005000 000000 031460 000000 000040
00040: 017160 031760 000000 000000 000500 017300 031464 000000
00050: 000000 000440 017070 041260 000000 000440 000000 017170
00060: 021760 000000 000440 017170 000000 031760 127576 000440
00070: 017340 031760 000000 000000 000000 000000 000000 000000
00100: SAME: TO 000200-1

*T RECORD 424 (%650, #1A8)
00000: 036000 060156 173417 010422 000000 000500 017360 126622
00010: 006001 007322 000000 031760 127520 000440 017340 031760
00020: 000000 127524 000440 017360 031460 006343 000000 000040
00030: 016000 070631 012001 007325 000000 033576 140000 000456
00040: 017030 031760 000000 127556 000440 017360 030760 000003
00050: 000000 000440 017000 031460 012223 000040 000000 006000
00060: 031460 006343 000040 016000 000000 025060 006001 007332
00070: 041576 000300 000000 000440 000000 000000 000000 000000
00100: SAME: TO 000200-1

*T RECORD 425 (%651, #1A9)
00000: 036000 060156 013273 010500 000000 017000 031460 007335
00010: 120040 005000 000000 031460 006343 000040 016000 135230
00020: 000000 034001 007335 031760 127526 000440 000000 017340
00030: 033760 000000 000511 017000 000000 031760 127524 000440
00040: 017340 033760 000000 000000 000512 017000 041576 000300
00050: 000000 005440 017000 053576 000004 022456 000000 017000
00060: 033471 011634 000457 006000 000000 031760 130150 000440
00070: 017300 021760 000000 000000 000000 000000 000000 000000
```

136

```
00100: SAME: TO 000200-1

*T RECORD 426 (%652, #1AA)
00000: 036000 060156 160743 010556 000000 000440 017070 043260
00010: 000000 000453 000000 017000 041576 000002 000440 017000
00020: 000000 007411 011650 020040 002000 111577 000000 000367
00030: 000440 017000 031460 007445 000000 020040 005000 115303
00040: 034001 007353 000000 031460 007367 150040 005000 041576
00050: 000000 000300 000440 017000 031460 007360 000000 020040
00060: 005000 111577 000360 000440 000000 017000 031460 007365
00070: 020040 005000 000000 031760 000000 000000 000000 000000
00100: SAME: TO 000200-1

*T RECORD 427 (%653, #1AB)
00000: 036000 060156 132216 010634 000000 127516 000440 017340
00010: 111577 000200 000000 000440 017000 031460 007367 114040
00020: 000000 005000 111573 000000 000500 017000 000000 031460
00030: 007367 120040 005000 001573 000000 130147 000440 017300
00040: 031760 000040 000000 005440 017070 041576 000300 000440
00050: 000000 017000 031460 007377 020040 005000 000000 052441
00060: 034001 007371 111577 000361 000000 000440 017000 031460
00070: 007374 120040 000000 005000 000000 000000 000000 000000
00100: SAME: TO 000200-1

*T RECORD 428 (%654, #1AC)
00000: 036000 060156 002111 010712 000000 031460 000000 002040
00010: 017000 111577 000000 000360 000440 017000 031460 007377
00020: 000000 120040 005000 031460 000000 006040 000000 017000
00030: 111577 000200 000440 017000 000000 121172 007347 114453
00040: 005000 031460 000000 007406 020040 005000 001573 130150
00050: 000000 000440 017300 021740 000000 150520 000000 017300
00060: 031477 000000 000440 017070 000000 021160 007410 000440
00070: 016170 031460 000000 007410 000000 000000 000000 000000
00100: SAME: TO 000200-1

*T RECORD 429 (%655, #1AD)
00000: 036000 060156 123630 010770 000000 154040 005000 021406
00010: 034001 007407 000000 033576 000004 001456 017000 103473
00020: 000000 007347 000453 016000 041576 000004 000000 000440
00030: 017000 043260 007445 020453 000000 005000 031760 127500
00040: 000440 017340 000000 121571 000000 000500 017000 031760
00050: 000000 127576 000040 017340 001571 007420 000000 040500
00060: 005300 021760 000000 000440 000000 017070 033471 011634
00070: 000457 006000 000000 033471 000000 000000 000000 000000
00100: SAME: TO 000200-1

*T RECORD 430 (%656, #1AE)
00000: 036000 060156 050665 011046 000000 011701 000457 006000
00010: 041576 000001 000000 000440 017000 007445 011650 020040
00020: 000000 002000 111577 000200 000440 017000 000000 072646
00030: 034001 007425 031460 007431 000000 114040 005000 001573
00040: 130150 000440 000000 017340 033760 000000 000517 017000
00050: 000000 103473 007443 000453 016000 111577 000000 000377
00060: 000440 017000 031460 007443 000000 020040 005000 121172
00070: 000000 000453 000000 017000 000000 000000 000000 000000
00100: SAME: TO 000200-1

*T RECORD 431 (%657, #1AF)
```

137

```
00000: 036000 060156 075151 011124 000000 031460 007443 120040
00010: 005000 041576 000000 000300 000440 017000 031460 007444
00020: 000000 020040 005000 111577 000360 000440 000000 017000
00030: 031460 007444 014040 005000 000000 111577 000367 000440
00040: 017000 031460 000000 007444 114040 005000 020061 006001
00050: 000000 007443 030477 011747 000440 006000 000000 031460
00060: 007422 000040 016000 031460 000000 006343 000040 016000
00070: 015776 024001 000000 007446 000000 000000 000000 000000
00100: SAME: TO 000200-1

*T RECORD 432 (%660, #1B0)
00000: 036000 060156 117455 011202 000000 033576 100000 000456
00010: 017030 031760 000000 127556 000440 017360 030760 000003
00020: 000000 000440 017000 031460 012220 000040 000000 006000
00030: 031460 006343 000040 016000 000000 053576 100000 000456
00040: 017030 031760 000000 127556 000440 017360 030760 000003
00050: 000000 000440 017000 031460 012222 000040 000000 006000
00060: 031460 006343 000040 016000 000000 162730 012001 007460
00070: 031460 007462 000000 005040 000000 000000 000000 000000
00100: SAME: TO 000200-1

*T RECORD 433 (%661, #1B1)
00000: 036000 060156 140663 011260 000000 016000 031460 000000
00010: 001040 017000 000000 031460 011730 000040 006000 031460
00020: 000000 011437 000040 006000 031460 006343 000000 000040
00030: 016000 146314 030001 007465 000000 031460 007467 005040
00040: 016000 031460 000000 000000 001040 017000 041576 000100
00050: 000000 000440 017000 007500 011424 020040 000000 002000
00060: 041576 017400 002440 017034 000000 031760 127526 000440
00070: 017360 031760 000000 127520 000000 000000 000000 000000
00100: SAME: TO 000200-1

*T RECORD 434 (%662, #1B2)
00000: 036000 060156 161000 011336 000000 000440 017340 041576
00010: 000100 000440 000000 017000 031460 007477 020040 005000
00020: 000000 041260 000000 000440 017030 031760 000000 127524
00030: 000440 017360 031460 006343 000000 000040 016000 110612
00040: 006001 007501 000000 031760 127556 000440 017340 030760
00050: 000000 000200 000440 017000 033660 007070 000000 000516
00060: 016070 143635 006001 007504 000000 031760 127556 000440
00070: 017340 070760 000000 000200 000000 000000 000000 000000
00100: SAME: TO 000200-1

*T RECORD 435 (%663, #1B3)
00000: 036000 060156 021143 011414 000000 000440 017000 043660
00010: 006343 000516 000000 016070 013113 014001 007507 031760
00020: 000000 127552 000440 017340 030760 100000 000000 000440
00030: 017000 031660 000000 000500 000000 017070 030760 000002
00040: 000440 017000 000000 031460 012220 000040 006000 031460
00050: 000000 006343 000040 016000 033776 014001 000000 007515
00060: 031760 127552 000440 017340 000000 070760 100000 000440
00070: 017000 041660 000000 000000 000000 000000 000000 000000
00100: SAME: TO 000200-1

*T RECORD 436 (%664, #1B4)
00000: 036000 060156 111177 011472 000000 000500 017070 030760
00010: 000002 000440 000000 017000 031460 012222 000040 006000
00020: 000000 031460 006343 000040 016000 104006 000000 002001
```

138

```
00030: 007523 031460 006343 000040 000000 016000 065606 002001
00040: 007524 031460 000000 006343 000040 016000 065607 034001
00050: 000000 007525 031760 000131 000440 017030 000000 031460
00060: 007550 150440 005000 040260 000000 007535 144440 005000
00070: 031760 127512 000000 000440 000000 000000 000000 000000
00100: SAME: TO 000200-1
```

```
*T RECORD 437 (%665, #1B5)
00000: 036000 060156 154431 011550 000000 017340 031760 000000
00010: 000500 017340 000000 100260 007531 120440 005000 110660
00020: 000000 000002 000440 017000 031760 000122 000000 000440
00030: 017030 031760 130273 000440 000000 017360 031760 127532
00040: 000440 017340 000000 000660 000000 000500 017000 031760
00050: 000000 130272 000440 017300 031460 007561 000000 000040
00060: 006000 031760 127530 000440 000000 017340 135002 034001
00070: 007543 030760 000000 000000 000000 000000 000000 000000
00100: SAME: TO 000200-1
```

```
*T RECORD 438 (%666, #1B6)
00000: 036000 060156 155175 011626 000000 000500 017000 031760
00010: 130266 000440 000000 017300 031460 007561 000040 006000
00020: 000000 031460 007600 000040 006000 031460 000000 007560
00030: 000040 016000 040260 000000 000000 000440 017000 033760
00040: 000200 000440 000000 017000 001660 130261 000440 017340
00050: 000000 031760 000000 000500 017000 100260 000000 007557
00060: 020440 005000 031560 006260 000000 000500 006030 031460
00070: 007552 000040 000000 016000 000000 000000 000000 000000
00100: SAME: TO 000200-1
```

```
*T RECORD 439 (%667, #1B7)
00000: 036000 060156 102127 011704 000000 031460 006244 000040
00010: 006000 031460 000000 006343 000040 016000 047763 034001
00020: 000000 007561 031460 007565 000040 006000 000000 031460
00030: 007565 000040 006060 031460 000000 007565 000040 006260
00040: 031460 000000 000000 000040 007260 043260 000000 000440
00050: 000000 017000 033760 000020 000441 017000 000000 031760
00060: 000060 000440 017030 013461 000000 000000 000441 017000
00070: 031460 007577 000000 014040 000000 000000 000000 000000
00100: SAME: TO 000200-1
```

```
*T RECORD 440 (%670, #1B8)
00000: 036000 060156 175702 011762 000000 005000 036460 000000
00010: 000440 017001 000000 111560 000012 000440 017000 031460
00020: 000000 007570 014040 005000 113560 000012 000000 000440
00030: 017000 100260 007570 000440 000000 016000 140637 002001
00040: 007577 001560 000000 000000 000500 007030 021107 006000
00050: 000000 130261 000033 000046 000141 000000 000000 000000
00060: 000000 000143 000000 000000 000000 000000 000131 000000
00070: 131017 016001 000000 007600 000000 000000 000000 000000
00100: SAME: TO 000200-1
```

```
*T RECORD 441 (%671, #1B9)
00000: 036000 060156 015774 012040 000000 041576 000020 001440
00010: 017035 030760 000000 000000 000500 017000 031760 127560
00020: 000000 000440 017340 031660 000000 000500 000000 017030
00030: 031760 127671 000440 017360 000000 031760 000400 000440
00040: 017270 031460 000000 000000 000040 007000 132664 006001
00050: 000000 007607 031760 127552 000440 017340 000000 070760
```

```
00060: 000001 000440 017000 041660 000000 006343 000500 016070
00070: 010775 006001 000000 007612 000000 000000 000000 000000
00100: SAME: TO 000200-1

*T RECORD 442 (%672, #1BA)
00000: 036000 060156 151061 012116 000000 031760 127552 000440
00010: 017340 030760 000000 000001 000440 017000 031660 006343
00020: 000000 000500 016070 141000 034001 007615 000000 041260
00030: 007621 150440 005030 031760 000000 130275 000440 017360
00040: 031460 007600 000000 000040 006000 031460 007655 000040
00050: 000000 016000 033576 000004 000456 017000 000000 041576
00060: 000004 000440 017000 007654 000000 007656 120040 002000
00070: 041576 000004 000000 000440 000000 000000 000000 000000
00100: SAME: TO 000200-1

*T RECORD 443 (%673, #1BB)
00000: 036000 060156 077444 012174 000000 017036 031460 007654
00010: 020040 005000 000000 031760 130275 000440 017360 031760
00020: 000000 127476 000440 017340 041576 000300 000000 000440
00030: 017000 111572 007633 020500 000000 005000 007650 007645
00040: 020040 001000 000000 133443 034001 007633 041260 000000
00050: 000000 000440 017030 031760 127524 000440 000000 017360
00060: 031760 127552 000440 017340 000000 030760 004000 000440
00070: 017000 041660 000000 000000 000000 000000 000000 000000
00100: SAME: TO 000200-1

*T RECORD 444 (%674, #1BC)
00000: 036000 060156 012501 012252 000000 000500 017000 031460
00010: 007645 120040 000000 005000 031760 127554 000440 017340
00020: 000000 030760 000020 000440 017000 041660 000000 000000
00030: 000500 017000 031460 007650 000000 020040 005000 031760
00040: 127524 000440 000000 017300 041260 006455 000440 006070
00050: 000000 031460 010713 000040 006000 031760 000000 127552
00060: 000440 017340 175130 012001 000000 007651 030760 004000
00070: 000440 017000 000000 041660 000000 000000 000000 000000
00100: SAME: TO 000200-1

*T RECORD 445 (%675, #1BD)
00000: 036000 060156 121004 012330 000000 000000 000500 017000
00010: 031460 007622 000000 120040 005000 031460 006244 000040
00020: 000000 006000 031460 006343 000040 016000 000000 060262
00030: 034001 007656 031760 127524 000000 000440 017340 033760
00040: 000000 000512 000000 017000 031760 127526 000440 017340
00050: 000000 033760 000000 000511 017000 053576 000000 000015
00060: 000456 017000 041576 000300 000000 000440 017000 000740
00070: 000000 020440 000000 017000 000000 000000 000000 000000
00100: SAME: TO 000200-1

*T RECORD 446 (%676, #1BE)
00000: 036000 060156 001775 012406 000000 033076 000000 000456
00010: 017000 033471 000000 011634 000457 006000 040260 000000
00020: 000000 000440 017000 041576 000002 003440 000000 017036
00030: 033576 000000 000516 017000 000000 031460 007703 120040
00040: 005000 031760 000000 130275 000440 017340 117114 034001
00050: 000000 007674 041576 000300 000440 017000 000000 031760
00060: 007703 120500 005000 041260 000000 000000 000440 017070
00070: 031760 000215 000000 000440 000000 000000 000000 000000
00100: SAME: TO 000200-1
```

```
*T RECORD 447 (%677, #1BF)
00000: 036000 060156 031502 012464 000000 017030 031460 006260
00010: 000040 006000 000000 031760 000212 000440 017030 031460
00020: 000000 006260 000040 006000 041576 000002 000000 000440
00030: 017000 111072 007720 120440 000000 005000 007720 011650
00040: 040040 002000 000000 041576 000300 000440 017000 031460
00050: 000000 007716 020040 005000 111577 000360 000000 000440
00060: 017000 031460 007713 120040 000000 005000 106004 034001
00070: 007712 053576 000000 000001 000000 000000 000000 000000
00100: SAME: TO 000200-1

*T RECORD 448 (%700, #1C0)
00000: 036000 060156 174645 012542 000000 000456 017000 111577
00010: 000361 000440 000000 017000 031460 007716 120040 005000
00020: 000000 033576 000001 000456 017000 111577 000000 000200
00030: 000440 017000 000240 007703 000000 014440 016000 041576
00040: 000002 000440 000000 017030 031460 007754 120040 005000
00050: 000000 041576 000001 000440 017000 033477 000000 007754
00060: 020442 005000 041576 000002 000000 000440 017000 031460
00070: 007732 120040 000000 005000 000000 000000 000000 000000
00100: SAME: TO 000200-1

*T RECORD 449 (%701, #1C1)
00000: 036000 060156 176320 012620 000000 041576 000300 000440
00010: 017000 031460 000000 007733 020040 005000 135647 034001
00020: 000000 007730 111577 000360 000440 017000 000000 031460
00030: 007733 120040 005000 053576 000000 000001 000456 017000
00040: 031760 130275 000000 000440 017340 121577 000200 000440
00050: 000000 017000 031760 007752 040500 005000 000000 041260
00060: 007743 020440 005070 041576 000000 000300 000440 017000
00070: 031460 007743 000000 020040 000000 000000 000000 000000
00100: SAME: TO 000200-1

*T RECORD 450 (%702, #1C2)
00000: 036000 060156 122524 012676 000000 005000 031760 000237
00010: 000440 017030 000000 031460 006260 000040 006000 031460
00020: 000000 012172 000040 006000 031562 000200 000000 000440
00030: 017030 031460 006260 000040 000000 006000 057534 034001
00040: 007746 033576 000000 000004 000456 017000 031460 012172
00050: 000000 000040 006000 031760 127524 000440 000000 017340
00060: 103760 000000 000512 017070 000000 031460 011650 000040
00070: 006000 031460 000000 007722 000000 000000 000000 000000
00100: SAME: TO 000200-1

*T RECORD 451 (%703, #1C3)
00000: 036000 060156 112676 012754 000000 000040 016000 041576
00010: 000010 000440 000000 017000 031460 007770 120040 005000
00020: 000000 041576 000300 000440 017000 031460 000000 007770
00030: 020040 005000 041576 000004 000000 000440 017000 007770
00040: 011312 020040 000000 002000 033576 000010 000456 017000
00050: 000000 031472 007770 154440 005030 057146 000000 012001
00060: 007764 031760 127524 000440 000000 017360 031760 127526
00070: 000440 017300 000000 031471 000000 000000 000000 000000
00100: SAME: TO 000200-1

*T RECORD 452 (%704, #1C4)
00000: 036000 060156 174433 013032 000000 010713 000440 006070
```

```
00010: 031460 007656 000000 000040 016000 031460 000000 000040
00020: 000000 007000 004430 000400 130275 000000 000000 130275
00030: 034001 007771 031460 007515 000000 000040 006000 031460
00040: 006511 000040 000000 016000 033576 000144 000456 017030
00050: 000000 031760 127556 000440 017360 031760 000000 127506
00060: 000440 017340 031760 127510 000000 000440 017360 031760
00070: 127534 000440 000000 017340 000000 000000 000000 000000
00100: SAME: TO 000200-1


*T RECORD 453 (%705, #1C5)
00000: 036000 060156 072221 013110 000000 031760 127524 000440
00010: 017360 031760 000000 127536 000440 017340 031760 127526
00020: 000000 000440 017360 031460 006343 000040 000000 016000
00030: 053576 000144 000456 017030 000000 031760 127556 000440
00040: 017360 031760 000000 127512 000440 017340 001612 014001
00050: 000000 010007 031760 127510 000440 017360 000000 031760
00060: 127530 000440 017340 031760 000000 127524 000440 017360
00070: 031760 127532 000000 000440 000000 000000 000000 000000
00100: SAME: TO 000200-1


*T RECORD 454 (%706, #1C6)
00000: 036000 060156 033273 013166 000000 017340 031760 127526
00010: 000440 017360 000000 031460 006343 000040 016000 076276
00020: 000000 022001 010015 031760 127526 000440 000000 017340
00030: 040576 000100 000440 017000 000000 031760 010025 122500
00040: 005034 053576 000000 037400 000456 017000 003576 000000
00050: 000000 000516 017000 033576 020000 000456 000000 017030
00060: 031760 127556 000440 017360 000000 100260 012220 000440
00070: 006000 031460 000000 006343 000000 000000 000000 000000
00100: SAME: TO 000200-1


*T RECORD 455 (%707, #1C7)
00000: 036000 060156 141241 013244 000000 000040 016000 136317
00010: 014001 010026 000000 040576 000100 000440 017000 041260
00020: 000000 010033 120440 005030 043576 140377 000000 000456
00030: 017030 031760 127556 000440 000000 017360 100260 012222
00040: 000440 006000 000000 031460 006343 000040 016000 114275
00050: 000000 034001 010034 041576 000300 000440 000000 017000
00060: 010132 010527 020040 002000 000000 031760 000003 000440
00070: 017030 031760 000000 130276 000000 000000 000000 000000
00100: SAME: TO 000200-1


*T RECORD 456 (%710, #1C8)
00000: 036000 060156 151061 013322 000000 000440 017360 031760
00010: 127552 000440 000000 017340 030760 100000 000440 017000
00020: 000000 031660 010132 050500 005070 031760 000000 130276
00030: 000440 017340 031760 000000 000000 000500 017000 041260
00040: 010107 014440 000000 005030 031760 130277 000440 017360
00050: 000000 031760 130277 000440 017340 030760 000000 000002
00060: 000440 017000 111660 000000 000000 000500 017000 060235
00070: 034001 010052 000000 041260 000000 000000 000000 000000
00100: SAME: TO 000200-1


*T RECORD 457 (%711, #1C9)
00000: 036000 060156 025677 013400 000000 010103 040440 005030
00010: 031760 127524 000000 000440 017360 031760 130300 000440
00020: 000000 017360 031760 130276 000440 017340 000000 033760
00030: 000370 000440 017000 003560 000000 011023 000500 006000
```

142

```
00040: 031460 010713 000000 000040 006000 031760 130300 000440
00050: 000000 017340 030760 000100 000440 017000 000000 111660
00060: 000000 000500 017000 030760 000000 010077 040500 005000
00070: 031760 130277 000000 000440 000000 000000 000000 000000
00100: SAME: TO 000200-1


*T RECORD 458 (%712, #1CA)
00000: 036000 060156 172313 013456 000000 017340 031760 000000
00010: 002500 017036 000000 003660 011023 000500 006000 122134
00020: 000000 034001 010070 031760 130300 000440 000000 017340
00030: 103760 000000 000500 017070 000000 031760 127524 000440
00040: 017340 040560 000000 000007 000440 017000 111660 000004
00050: 000000 000440 017000 101760 010061 120500 000000 005030
00060: 031460 010061 000040 016060 000000 031460 006455 000040
00070: 006000 031460 000000 010713 000000 000000 000000 000000
00100: SAME: TO 000200-1


*T RECORD 459 (%713, #1CB)
00000: 036000 060156 077421 013534 000000 000040 006000 031760
00010: 130277 000440 000000 017340 101760 010047 000500 016070
00020: 000000 031460 006455 000040 006000 031460 000000 010713
00030: 000040 006000 031760 130276 000000 000440 017340 064105
00040: 034001 010106 000000 021760 010043 000500 016070 031760
00050: 000000 127524 000440 017300 041260 000000 000000 000440
00060: 017070 031760 130300 000440 000000 017360 031760 130300
00070: 000440 017340 000000 030760 000000 000000 000000 000000
00100: SAME: TO 000200-1


*T RECORD 460 (%714, #1CC)
00000: 036000 060156 161254 013612 000000 000020 000440 017000
00010: 033760 000340 000000 000440 017000 121660 000000 000500
00020: 000000 017000 003560 010125 114500 005000 000000 031460
00030: 011023 000040 006000 031760 000000 130300 000440 017340
00040: 033760 000077 000000 000440 017000 101760 000000 000500
00050: 000000 017070 003560 011023 000500 006000 000000 067377
00060: 016001 010124 031460 010112 000000 000040 016000 031760
00070: 127524 000440 000000 017300 000000 000000 000000 000000
00100: SAME: TO 000200-1


*T RECORD 461 (%715, #1CD)
00000: 036000 060156 102473 013670 000000 121160 010713 000440
00010: 006070 031760 000000 127552 000440 017340 030760 077777
00020: 000000 000440 017000 041660 006455 000500 000000 006070
00030: 031460 006343 000040 016000 000000 141626 001400 130276
00040: 000000 000000 000000 000000 130276 034001 010133 021160
00050: 000000 010145 150440 005030 031760 127566 000000 000440
00060: 017360 031760 127570 000440 000000 017360 031760 127510
00070: 000440 017340 000000 031760 000000 000000 000000 000000
00100: SAME: TO 000200-1


*T RECORD 462 (%716, #1CE)
00000: 036000 060156 120637 013746 000000 000000 000500 017340
00010: 020760 000000 000000 000440 017000 031760 000000 000500
00020: 000000 017340 100260 010141 120440 005000 000000 031760
00030: 130301 000440 017300 031260 000000 010274 000440 016070
00040: 043560 000137 000000 000441 017000 031760 127562 000440
00050: 000000 017340 111560 000040 001440 017000 000000 031460
00060: 010274 020040 005000 040122 000000 034001 010151 111560
```

```
00070: 000053 005440 000000 017000 000000 000000 000000 000000
00100: SAME: TO 000200-1


*T RECORD 463 (%717, #1CF)
00000: 036000 060156 002110 014024 000000 031760 010155 020500
00010: 005000 111560 000000 000055 000440 017000 031760 010156
00020: 000000 120500 005000 010274 010174 020040 000000 001000
00030: 110560 000060 000440 017000 000000 031460 010274 014040
00040: 005000 111560 000000 000072 000440 017000 031460 010177
00050: 000000 014040 005000 031760 127524 000440 000000 017340
00060: 111561 000103 000440 017000 000000 030760 010203 020500
00070: 005000 031760 000000 127526 000000 000000 000000 000000
00100: SAME: TO 000200-1


*T RECORD 464 (%720, #1D0)
00000: 036000 060156 164122 014102 000000 000440 017340 111561
00010: 000131 000440 000000 017000 025724 034001 010167 030760
00020: 000000 010203 020500 005000 031760 130301 000000 000440
00030: 017340 111561 000122 000440 000000 017000 000660 010203
00040: 020500 005000 000000 031460 010274 000040 016000 031760
00050: 000000 127562 000440 017300 121560 000054 000000 001440
00060: 017030 031460 010274 000040 000000 016060 031760 127564
00070: 001440 017340 000000 033760 000000 000000 000000 000000
00100: SAME: TO 000200-1


*T RECORD 465 (%721, #1D1)
00000: 036000 060156 135050 014160 000000 000000 003517 017036
00010: 001577 000000 000000 003500 017037 001660 010274 000500
00020: 000000 016070 031760 127564 000440 017340 000000 033760
00030: 000000 000517 017000 011665 000000 034001 010205 031760
00040: 127562 000440 000000 017340 031760 000000 000500 017000
00050: 000000 033477 010212 020046 005000 113077 000000 010212
00060: 014457 005000 003066 000000 000000 000457 017000 031477
00070: 000000 000440 000000 017000 000000 000000 000000 000000
00100: SAME: TO 000200-1


*T RECORD 466 (%722, #1D2)
00000: 036000 060156 065040 014236 000000 041260 010215 114440
00010: 005030 043260 000000 000000 000457 017000 031760 127562
00020: 000000 000440 017360 031760 127564 000440 000000 017360
00030: 031760 127566 000440 017300 000000 111561 000103 000440
00040: 017000 041260 000000 010223 120440 005030 031477 010243
00050: 000000 000440 016070 111713 034001 010223 000000 031760
00060: 127572 000440 017360 031760 000000 127570 000440 017300
00070: 111561 000131 000000 000440 000000 000000 000000 000000
00100: SAME: TO 000200-1


*T RECORD 467 (%723, #1D3)
00000: 036000 060156 016351 014314 000000 017000 031477 010243
00010: 020440 005070 000000 031760 127500 000440 017340 020760
00020: 000000 000000 000500 017000 031760 130301 000000 000440
00030: 017340 031760 127570 000440 000000 017300 113577 000000
00040: 000517 017030 000000 121077 000000 000440 017000 031760
00050: 000000 010237 040500 005000 031260 000000 000000 000440
00060: 017030 031460 010241 114040 000000 005060 041260 000000
00070: 000440 017070 000000 023767 000000 000000 000000 000000
00100: SAME: TO 000200-1
```

144

```
*T RECORD 468 (%724, #1D4)
00000: 036000 060156 140346 014372 000000 034001 010241 111577
00010: 000000 000500 000000 017030 031760 127572 000440 017360
00020: 000000 041560 000040 001440 017000 031460 000000 010274
00030: 120040 005000 031760 127572 000000 000440 017340 031760
00040: 000000 005500 000000 017000 020760 010254 020100 005000
00050: 000000 031460 010252 114040 005000 100760 000000 000000
00060: 001500 017000 031260 007462 000000 000440 006070 031460
00070: 010245 000040 000000 016000 000000 000000 000000 000000
00100: SAME: TO 000200-1

*T RECORD 469 (%725, #1D5)
00000: 036000 060156 014365 014450 000000 031760 127566 000440
00010: 017340 031760 000000 127476 000440 017300 030760 000000
00020: 000000 000500 017040 063501 034001 010257 000000 121660
00030: 010264 014500 005000 031460 000000 010262 114040 005000
00040: 020760 000000 000000 000500 017000 031760 127524 000440
00050: 000000 017300 031260 000000 000440 017070 000000 031760
00060: 127570 000440 017340 031760 000000 127500 000440 017300
00070: 030760 000000 000000 005500 000000 000000 000000 000000
00100: SAME: TO 000200-1

*T RECORD 470 (%726, #1D6)
00000: 036000 060156 036147 014526 000000 017040 121660 010274
00010: 014500 005000 000000 031460 010272 114040 005000 020760
00020: 000000 000000 000500 017000 031760 127526 000000 000440
00030: 017300 031260 000000 000440 000000 017070 031460 000000
00040: 000040 007000 000000 055735 000400 130301 000000 130301
00050: 000000 002001 010275 031460 006343 000040 000000 016000
00060: 066360 034001 010276 031460 000000 000000 050040 007000
00070: 113560 000100 000000 000440 000000 000000 000000 000000
00100: SAME: TO 000200-1

*T RECORD 471 (%727, #1D7)
00000: 036000 060156 162021 014604 000000 017000 041576 000100
00010: 000440 017000 000000 031460 010307 120440 005000 031460
00020: 000000 010307 014040 005000 121560 000020 000000 000440
00030: 017000 031460 010307 040040 000000 005000 003560 000340
00040: 000440 017000 000000 031460 011023 000040 006000 031460
00050: 000000 006343 000040 016000 031760 127562 000000 000440
00060: 017340 031760 127572 000440 000000 017300 033760 010315
00070: 150517 005040 000000 041576 000000 000000 000000 000000
00100: SAME: TO 000200-1

*T RECORD 472 (%730, #1D8)
00000: 036000 060156 004025 014662 000000 000020 000440 017000
00010: 142055 034001 000000 010314 031460 010450 021040 016000
00020: 000000 030760 010371 017500 005036 111560 000000 000040
00030: 000440 017000 003660 010450 000000 021502 005000 113560
00040: 000060 000441 000000 017000 031462 010450 017440 005037
00050: 000000 111561 000011 000440 017000 001561 000000 010325
00060: 140100 005030 031460 010450 000000 001040 016060 041260
00070: 000000 000440 000000 017070 000000 000000 000000 000000
00100: SAME: TO 000200-1

*T RECORD 473 (%731, #1D9)
00000: 036000 060156 126473 014740 000000 043560 000137 000441
00010: 017000 031760 000000 127564 000440 017300 111561 000101
```

```
00020: 000000 000440 017000 031260 010340 020440 000000 005030
00030: 177145 034001 010332 031760 000000 127566 000440 017300
00040: 111561 000113 000000 000440 017000 031460 010340 020040
00050: 000000 005000 031760 127570 000440 017300 000000 111561
00060: 000114 000440 017000 031460 000000 010450 120040 005000
00070: 111560 000140 000000 001440 000000 000000 000000 000000
00100: SAME: TO 000200-1


*T RECORD 474 (%732, #1DA)
00000: 036000 060156 152445 015016 000000 017060 031460 010450
00010: 114040 005000 000000 031760 127564 000440 017340 030760
00020: 000000 000000 000500 017000 031460 010346 000000 114040
00030: 005000 041260 000000 000440 000000 017070 111660 000002
00040: 000440 017000 000000 031460 010351 040040 005000 051476
00050: 000000 034001 010350 031760 000002 000440 000000 017070
00060: 031760 127566 000440 017340 000000 020760 000000 000500
00070: 017000 031460 000000 010355 000000 000000 000000 000000
00100: SAME: TO 000200-1


*T RECORD 475 (%733, #1DB)
00000: 036000 060156 013436 015074 000000 114040 005000 101760
00010: 000000 000440 000000 017070 111660 000010 000440 017000
00020: 000000 031460 010360 014040 005000 031760 000000 000010
00030: 000440 017070 031760 127570 000000 000440 017340 020760
00040: 000000 000500 000000 017000 031460 010364 114040 005000
00050: 000000 101760 000000 000440 017070 111660 000000 000111
00060: 000440 017000 031460 010367 000000 014040 005000 103071
00070: 034001 010366 000000 031760 000000 000000 000000 000000
00100: SAME: TO 000200-1


*T RECORD 476 (%734, #1DC)
00000: 036000 060156 032025 015152 000000 000111 000440 017070
00010: 031760 127562 000000 000440 017300 111760 010450 000500
00020: 000000 016070 031760 127570 000440 017340 000000 103577
00030: 000000 000512 017030 031760 000000 127534 000440 017360
00040: 031760 127566 000000 000440 017340 021760 000000 003500
00050: 000000 017037 041576 000100 000440 017000 000000 030760
00060: 010404 020500 005000 031760 000000 127576 000440 017340
00070: 001660 000000 000000 000500 000000 000000 000000 000000
00100: SAME: TO 000200-1


*T RECORD 477 (%735, #1DD)
00000: 036000 060156 126126 015230 000000 017300 021760 000000
00010: 000440 017070 000000 031460 000000 000040 017160 130753
00020: 000000 034001 010404 103260 000000 000451 000000 017030
00030: 031760 127536 000440 017360 000000 031760 127506 000440
00040: 017340 010260 000000 000000 000440 017000 101760 010412
00050: 000000 014500 005300 031460 010407 000040 000000 016040
00060: 030760 000000 000500 017000 000000 031760 127564 000440
00070: 017340 033760 000000 000116 000000 000000 000000 000000
00100: SAME: TO 000200-1


*T RECORD 478 (%736, #1DE)
00000: 036000 060156 062111 015306 000000 000441 017000 021760
00010: 000000 000500 000000 017000 033460 010422 014053 005000
00020: 000000 033760 000114 000041 017000 031460 000000 010422
00030: 020040 005000 033760 000124 000000 000441 017000 076176
00040: 034001 010422 000000 001660 000005 000440 017340 033760
```

```
00050: 000000 177400 000442 017000 041562 000000 000000 000500
00060: 017030 001561 000000 000500 000000 017070 031760 127510
00070: 000440 017340 000000 033760 000000 000000 000000 000000
00100: SAME: TO 000200-1


*T RECORD 479 (%737, #1DF)
00000: 036000 060156 021066 015364 000000 000000 000515 017000
00010: 031760 127506 000000 000440 017340 031760 127510 000440
00020: 000000 017360 033471 011634 000457 006000 000000 033471
00030: 011701 000457 006000 031460 000000 011650 000040 006000
00040: 030760 011747 000000 000500 006000 013472 000000 000452
00050: 000000 017000 031460 010434 140040 005000 000000 006213
00060: 022001 010440 030473 011747 000000 000440 006000 030760
00070: 000377 000440 000000 017000 000000 000000 000000 000000
00100: SAME: TO 000200-1


*T RECORD 480 (%740, #1E0)
00000: 036000 060156 073755 015442 000000 031460 011747 000040
00010: 006000 031760 000000 127510 000440 017300 031475 000000
00020: 000000 000440 017070 031760 127562 000440 000000 017340
00030: 101760 000000 000500 017070 000000 031460 000000 121040
00040: 017000 031460 000000 000000 000040 007000 034677 034001
00050: 000000 010451 031460 010463 150040 005000 000000 111560
00060: 000153 000440 017000 031460 000000 010456 120040 005000
00070: 031760 000032 000000 000440 000000 000000 000000 000000
00100: SAME: TO 000200-1


*T RECORD 481 (%741, #1E1)
00000: 036000 060156 015563 015520 000000 017030 031760 127564
00010: 000440 017360 000000 031760 127552 000440 017340 031760
00020: 000000 127566 000440 017360 031760 127554 000000 000440
00030: 017340 031760 127570 000440 000000 017360 031460 010526
00040: 000040 016000 000000 043560 000137 000441 017000 111560
00050: 000000 000040 001440 017000 041260 010526 000000 020440
00060: 005030 111560 000060 000440 000000 017000 161703 034001
00070: 010467 101760 000000 010526 000000 000000 000000 000000
00100: SAME: TO 000200-1


*T RECORD 482 (%742, #1E2)
00000: 036000 060156 146767 015576 000000 020500 005030 111560
00010: 000061 000440 000000 017000 031760 010474 120500 005035
00020: 000000 031760 127562 000440 017360 031460 000000 010526
00030: 000040 016000 031760 127564 000000 000440 017340 113561
00040: 000100 000441 000000 017000 003561 000000 005501 017000
00050: 000000 031460 010526 040040 005000 121561 000000 000037
00060: 000440 017000 031460 010526 000000 040040 005000 031461
00070: 000000 001440 000000 017034 000000 000000 000000 000000
00100: SAME: TO 000200-1


*T RECORD 483 (%743, #1E3)
00000: 036000 060156 123365 015654 000000 031760 000000 003500
00010: 017010 031760 000000 077777 000440 017034 022353 034001
00020: 000000 010505 033760 000000 000502 017000 000000 031760
00030: 127562 000440 017340 031760 000000 000000 000500 017034
00040: 033760 000000 000000 000503 017000 041260 000000 000440
00050: 000000 017070 031760 127566 000440 017340 000000 111561
00060: 000017 000440 017000 031460 000000 010516 040040 005000
00070: 031760 127570 000000 000440 000000 000000 000000 000000
```

147

```
00100: SAME: TO 000200-1

*T RECORD 484 (%744, #1E4)
00000: 036000 060156 145743 015732 000000 017340 041562 000000
00010: 000500 017030 000000 061563 000000 000500 017070 041560
00020: 000000 000040 000440 017000 031460 010526 000000 121040
00030: 005000 031760 127566 000440 000000 017340 176335 010001
00040: 010523 031760 000000 127552 000440 017360 031760 127570
00050: 000000 000440 017340 031760 127554 000440 000000 017360
00060: 031460 000000 000040 007000 000000 056341 034001 010527
00070: 031760 127502 000000 000440 000000 000000 000000 000000
00100: SAME: TO 000200-1

*T RECORD 485 (%745, #1E5)
00000: 036000 060156 121674 016010 000000 017340 033760 100000
00010: 000446 017000 000000 033760 000007 000447 017000 033760
00020: 000000 000000 003517 017035 033760 000000 000000 000504
00030: 017000 031760 127514 000440 000000 017340 033760 000000
00040: 000503 017300 000000 013477 000000 000457 017000 001567
00050: 000000 010544 014520 005340 101760 010671 000000 000520
00060: 006300 121563 010536 020500 000000 005030 101760 000000
00070: 000500 017270 000000 031460 000000 000000 000000 000000
00100: SAME: TO 000200-1

*T RECORD 486 (%746, #1E6)
00000: 036000 060156 021624 016066 000000 010536 000040 016100
00010: 031760 130302 000000 000440 017300 047477 034001 010545
00020: 000000 031760 050117 000440 017070 031760 000000 047514
00030: 000440 017170 031760 127504 000000 000440 017340 031460
00040: 010671 000040 000000 006000 030760 130302 000440 017000
00050: 000000 031760 000000 000500 017000 001567 000000 010560
00060: 020500 005340 031566 000000 000000 000500 017070 121566
00070: 010616 114500 000000 005030 000000 000000 000000 000000
00100: SAME: TO 000200-1

*T RECORD 487 (%747, #1E7)
00000: 036000 060156 104241 016144 000000 001563 010560 020500
00010: 005030 021760 000000 010552 000500 016030 031760 130302
00020: 000000 000440 017300 031760 046515 000440 000000 017070
00030: 031760 051131 000440 017170 000000 145525 034001 010563
00040: 031760 127512 000000 000440 017340 031460 010671 000040
00050: 000000 006000 010567 010620 120040 002000 000000 101760
00060: 010564 000500 016340 031760 000000 127512 000440 017340
00070: 031760 010671 000000 000500 000000 000000 000000 000000
00100: SAME: TO 000200-1

*T RECORD 488 (%750, #1E8)
00000: 036000 060156 043712 016222 000000 006340 010573 010620
00010: 120040 002000 000000 031460 010570 000040 016000 031760
00020: 000000 130302 000440 017300 031760 043113 000000 000440
00030: 017070 031760 054523 000440 000000 017170 041576 000020
00040: 000440 017000 000000 031460 010604 120040 005000 031760
00050: 000000 127506 000440 017340 177417 034001 000000 010601
00060: 031460 010671 000040 006000 000000 010604 010620 120040
00070: 002000 101760 000000 010601 000000 000000 000000 000000
00100: SAME: TO 000200-1

*T RECORD 489 (%751, #1E9)
```

148

```
00000: 036000 060156 035232 016300 000000 000500 016340 031760
00010: 127502 000440 000000 017340 033760 000000 000517 017000
00020: 000000 013463 000000 000443 017300 030760 000000 130312
00030: 000440 017000 013477 000000 000000 005457 017100 001567
00040: 010615 014520 000000 005340 061566 000000 000500 017070
00050: 000000 001563 010610 020100 005030 010610 000000 010616
00060: 014040 001060 031460 000000 000000 000040 007000 031460
00070: 010702 000040 000000 006000 000000 000000 000000 000000
00100: SAME: TO 000200-1

*T RECORD 490 (%752, #1EA)
00000: 036000 060156 140135 016356 000000 076233 002001 010617
00010: 031460 000000 000000 001040 007000 052337 007400 130302
00020: 000000 054130 054130 020103 044101 044516 000000 020114
00030: 047517 050377 052516 052523 000000 042504 020102 046117
00040: 041513 051777 000000 143636 034001 010620 033760 000000
00050: 000000 000500 017000 031460 000000 000100 000000 015000
00060: 031760 127476 000440 017340 000000 033760 000013 000441
00070: 017000 030760 000000 000000 000000 000000 000000 000000
00100: SAME: TO 000200-1

*T RECORD 491 (%753, #1EB)
00000: 036000 060156 007644 016434 000000 006500 017000 031460
00010: 000000 000440 000000 017000 031460 010663 020040 005000
00020: 000000 013461 010641 054441 005000 010641 000000 012130
00030: 140040 002000 113577 000200 000000 000457 017000 031460
00040: 010634 114040 000000 005000 010260 010627 000440 016000
00050: 000000 111577 000040 000440 017000 031460 000000 010637
00060: 114040 005000 016070 034001 000000 010636 110077 010627
00070: 000440 016000 000000 111577 000000 000000 000000 000000
00100: SAME: TO 000200-1

*T RECORD 492 (%754, #1EC)
00000: 036000 060156 012221 016512 000000 000177 000440 017000
00010: 031460 010627 000000 022040 016000 001560 000007 000440
00020: 000000 017340 033760 010646 154517 005000 000000 031460
00030: 010646 020040 005000 030760 000000 130321 000440 017000
00040: 031460 010665 000000 000040 016000 031260 000000 000440
00050: 000000 017000 031460 010652 114040 005000 000000 030760
00060: 130335 000440 017000 031460 000000 010665 000040 016000
00070: 031477 000000 000000 000440 000000 000000 000000 000000
00100: SAME: TO 000200-1

*T RECORD 493 (%755, #1ED)
00000: 036000 060156 177467 016570 000000 017000 031460 010656
00010: 114040 005000 000000 177752 032001 010654 030760 130302
00020: 000000 000440 017000 031460 010665 000040 000000 016000
00030: 033760 000017 000441 017000 000000 031577 100000 000440
00040: 017070 033477 000000 000000 000440 017000 011460 010625
00050: 000000 020440 005030 003563 010625 000500 000000 016000
00060: 031460 000000 000040 011000 000000 031760 000000 000400
00070: 007030 031460 000000 010702 000000 000000 000000 000000
00100: SAME: TO 000200-1

*T RECORD 494 (%756, #1EE)
00000: 036000 060156 037306 016646 000000 000040 006000 031460
00010: 000000 001040 000000 011000 031460 000000 000040 011000
00020: 000000 031460 000000 000040 007000 021170 000000 015000
```

149

```
00030: 130321 052117 047440 046501 000000 047131 020102 046117
00040: 041513 051440 000000 044516 020114 044516 042777 052117
00050: 000000 047440 046501 047131 020103 044101 000000 051101
00060: 041524 042522 051440 044516 000000 020114 044516 042777
00070: 135070 022001 000000 010671 000000 000000 000000 000000
00100: SAME: TO 000200-1
```

```
*T RECORD 495 (%757, #1EF)
00000: 036000 060156 156402 016724 000000 031760 000000 000500
00010: 017000 120563 000000 010675 020500 005000 041067 010676
00020: 000000 014440 005000 111064 010676 120440 000000 005000
00030: 031760 000000 124500 007000 000000 030760 130353 000440
00040: 017000 031460 000000 010702 000040 006000 031460 000000
00050: 000000 000040 011000 031460 000000 001040 000000 007000
00060: 150135 004000 130353 044514 000000 046105 043501 046040
00070: 050117 044516 000000 052105 000000 000000 000000 000000
00100: SAME: TO 000200-1
```

```
*T RECORD 496 (%760, #1F0)
00000: 036000 060156 176503 017002 000000 051377 015276 022001
00010: 010702 021760 000000 000000 000440 017030 031760 127662
00020: 000000 000440 017360 031760 127600 000440 000000 017360
00030: 031260 000000 000440 017030 000000 031760 130370 000440
00040: 017360 033760 000000 130363 000440 017000 031460 013031
00050: 000000 000040 006000 031760 127556 000440 000000 017340
00060: 033760 000000 000516 007000 000000 055404 003000 130363
00070: 100032 000000 000000 000000 000000 000000 000000 000000
00100: SAME: TO 000200-1
```

```
*T RECORD 497 (%761, #1F1)
00000: 036000 060156 025467 017060 000000 000111 000002 000000
00010: 030530 034001 000000 010713 031760 127510 000440 017340
00020: 000000 030760 000000 000500 017000 043260 000000 000000
00030: 000440 017000 031760 127500 000000 000440 017340 043260
00040: 000000 000441 000000 017000 033760 000000 000502 017000
00050: 000000 033760 000000 000503 017000 031760 000000 127576
00060: 000440 017340 033760 000000 000000 000504· 017000 031760
00070: 130372 000440 000000 017340 000000 000000 000000 000000
00100: SAME: TO 000200-1
```

```
*T RECORD 498 (%762, #1F2)
00000: 036000 060156 150203 017136 000000 033760 000000 000505
00010: 017000 121160 000000 000000 000443 017000 001160 010753
00020: 000000 020444 005340 111660 000000 000500 000000 017000
00030: 047414 034001 010731 031460 000000 010746 020040 005000
00040: 041576 000020 000000 000440 017000 031460 010747 120040
00050: 000000 005000 021163 000000 005440 017140 000000 111660
00060: 010741 020500 005200 010741 000000 012306 020040 002000
00070: 101160 000000 000000 000444 000000 000000 000000 000000
00100: SAME: TO 000200-1
```

```
*T RECORD 499 (%763, #1F3)
00000: 036000 060156 126045 017214 000000 017340 031460 010746
00010: 000040 016260 000000 031460 000000 000440 017240 111660
00020: 000000 010747 020500 005000 031460 010747 000000 120440
00030: 005030 001165 000000 000441 000000 017360 103461 000000
00040: 000441 017000 000000 013462 000000 000442 017000 051233
00050: 000000 034001 010747 031260 000000 000440 000000 017000
```

```
00060: 101260 010752 020440 005340 000000 030760 000000 000500
00070: 017000 103460 000000 010726 000000 000000 000000 000000
00100: SAME: TO 000200-1


*T RECORD 500 (%764, #1F4)
00000: 036000 060156 151711 017272 000000 000440 016000 013461
00010: 000000 000441 000000 017000 001161 010761 014445 005340
00020: 000000 023760 000000 000500 017000 001160 000000 000000
00030: 001444 017340 103460 012306 000000 000440 006160 031460
00040: 010753 000040 000000 016000 031760 127510 000440 017340
00050: 000000 031462 000000 000440 017000 043260 000000 011022
00060: 020440 005000 030760 000000 000000 000500 017000 035541
00070: 034001 010765 000000 121160 000000 000000 000000 000000
00100: SAME: TO 000200-1


*T RECORD 501 (%765, #1F5)
00000: 036000 060156 030426 017350 000000 000000 000443 017000
00010: 001160.011022 000000 020444 005340 111660 000000 000500
00020: 000000 017000 031260 011016 020440 005030 000000 043260
00030: 000000 000450 017060 031760 000000 127476 000440 017340
00040: 043260 000000 000000 000452 017000 033760 002400 000457
00050: 000000 017000 033460 000000 000451 017000 000000 003577
00060: 000000 000517 017000 031460 000000 000000 000440 017030
00070: 031463 000000 000000 000500 000000 000000 000000 000000
00100: SAME: TO 000200-1


*T RECORD 502 (%766, #1F6)
00000: 036000 060156 014335 017426 000000 015030 031464 000000
00010: 000500 015030 000000 031476 000000 000500 015030 016537
00020: 000000 034001 011003 031260 000000 000500 000000 015030
00030: 031460 000000 000100 015000 000000 100260 011007 120440
00040: 005000 020760 000000 130371 000440 017000 100260 012146
00050: 000000 000440 006000 031460 000000 000040 000000 011000
00060: 030760 000000 000400 011000 000000 033760 000000 000416
00070: 011000 033760 000000 000000 000000 000000 000000 000000
00100: SAME: TO 000200-1


*T RECORD 503 (%767, #1F7)
00000: 036000 060156 167540 017504 000000 000404 011000 033760
00010: 000000 000403 000000 011000 033760 000000 000400 017000
00020: 000000 031260 000000 000440 017000 101260 000000 011021
00030: 020440 005340 030760 000000 000000 000500 017000 122547
00040: 004001 011021 000000 103460 010765 000440 016000 031460
00050: 000000 000000 000040 007000 004646 001000 000000 130371
00060: 177777 130373 060763 034001 000000 011023 031460 000000
00070: 000440 017030 000000 031760 000000 000000 000000 000000
00100: SAME: TO 000200-1


*T RECORD 504 (%770, #1F8)
00000: 036000 060156 120044 017562 000000 130435 000440 017360
00010: 031760 127524 000000 000440 017340 033760 000000 000512
00020: 000000 017000 031760 127526 000440 017340 000000 033760
00030: 000000 000511 017000 031760 000000 127510 000440 017340
00040: 030760 000000 000000 000500 017000 031760 127506 000440
00050: 000000 017340 031760 130435 000440 017300 000000 111660
00060: 000000 000500 017040 033760 000000 011041 120517 005000
00070: 111577 000200 000000 000440 000000 000000 000000 000000
00100: SAME: TO 000200-1
```

```
*T RECORD 505 (%771, #1F9)
00000: 036000 060156 100744 017640 000000 017000 031460 011131
00010: 114040 005000 000000 137130 034001 011041 031460 011133
00020: 000000 000040 006000 031760 130435 000440 000000 017340
00030: 030760 000200 000440 017000 000000 033760 000300 000457
00040: 017000 111660 000000 011131 154500 005000 031476 011131
00050: 000000 014440 005000 041176 011060 114457 000000 005000
00060: 030471 011053 020440 005000 000000 031760 130434 000440
00070: 017340 101760 000000 011057 000000 000000 000000 000000
00100: SAME: TO 000200-1

*T RECORD 506 (%772, #1FA)
00000: 036000 060156 163762 017716 000000 000500 016030 031760
00010: 127516 000440 000000 017340 111572 000000 000500 017000
00020: 000000 031460 011057 014040 005000 031760 000000 127476
00030: 000440 017340 041721 034001 000000 011057 031460 011500
00040: 000040 006000 000000 031760 127524 000440 017300 103472
00050: 000000 000000 000452 017070 031760 127552 000000 000440
00060: 017340 030760 010000 000440 000000 017000 031760 127476
00070: 000440 017300 000000 033760 000000 000000 000000 000000
00100: SAME: TO 000200-1

*T RECORD 507 (%773, #1FB)
00000: 036000 060156 103623 017774 000000 000300 000457 017000
00010: 041660 000000 000000 000500 017040 111572 011077 020500
00020: 000000 005000 041177 011075 020456 005000 000000 031460
00030: 011077 120040 005000 031760 000000 127516 000440 017340
00040: 111572 000000 000000 000500 017000 031460 011077 120040
00050: 000000 005000 013337 034001 011075 013472 000000 000000
00060: 000452 017030 031760 127524 000000 000440 017360 031760
00070: 127524 000440 000000 017340 000000 000000 000000 000000
00100: SAME: TO 000200-1

*T RECORD 508 (%774, #1FC)
00000: 036000 060156 052746 020052 000000 031760 130434 000440
00010: 017300 041177 000000 000000 000456 017000 030760 011106
00020: 000000 020500 005040 111660 000000 000500 000000 017000
00030: 011106 011312 140040 002000 000000 031460 011305 154040
00040: 006000 031760 000000 127476 000440 017340 031760 127516
00050: 000000 000440 017300 111660 000000 000500 000000 017040
00060: 041177 011114 020456 005000 000000 111660 011125 120500
00070: 005000 073117 000000 034001 000000 000000 000000 000000
00100: SAME: TO 000200-1

*T RECORD 509 (%775, #1FD)
00000: 036000 060156 102735 020130 000000 011113 031460 011125
00010: 120040 005000 000000 031760 127520 000440 017340 041576
00020: 000000 000300 000440 017000 043260 011120 000000 120452
00030: 005000 033760 000000 000512 000000 017000 031760 127500
00040: 000440 017340 000000 021571 000000 000500 017000 031460
00050: 000000 011124 020040 005000 103471 011125 000000 000451
00060: 016000 031460 007460 000040 000000 006000 031471 000000
00070: 000440 017030 000000 031760 000000 000000 000000 000000
00100: SAME: TO 000200-1

*T RECORD 510 (%776, #1FE)
00000: 036000 060156 007723 020206 000000 127526 000440 017360
```

152

```
00010: 031472 000000 000000 000440 017030 031760 127524 000440
00020: 000000 017360 025103 004001 011131 031760 000000 130435
00030: 000440 017340 033760 000000 000000 000500 007000 057226
00040: 001400 130433 000000 000000 000000 000000 130433 034001
00050: 000000 011133 043260 000000 002444 017000 000000 041576
00060: 000300 000440 017000 011155 000000 011240 120040 002000
00070: 031462 000000 000000 000440 000000 000000 000000 000000
00100: SAME: TO 000200-1


*T RECORD 511 (%777, #1FF)
00000: 036000 060156 026404 020264 000000 017030 031760 130433
00010: 000440 017360 000000 031463 000000 000440 017030 031760
00020: 000000 130434 000440 017360 031760 130435 000000 000440
00030: 017340 031460 011155 054040 000000 005000 030760 000200
00040: 000440 017000 000000 121660 000000 000500 017000 011155
00050: 000000 011312 014040 002000 031460 011305 000000 154040
00060: 006000 011155 011240 054040 000000 002000 002651 034001
00070: 011151 031462 000000 000000 000000 000000 000000 000000
00100: SAME: TO 000200-1


*T RECORD 512 (%1000, #200)
00000: 036000 060156 131352 020342 000000 000440 017030 031760
00010: 130433 000440 000000 017360 031463 000000 000440 017030
00020: 000000 031760 130434 000440 017360 031760 000000 130435
00030: 000440 017340 030760 000040 000000 000440 017000 031464
00040: 011213 154440 000000 005000 033760 011213 020517 005000
00050: 000000 111564 000003 000440 017000 121077 000000 011164
00060: 020440 005000 031460 011213 000000 020040 005000 111564
00070: 000001 006440 000000 017000 000000 000000 000000 000000
00100: SAME: TO 000200-1


*T RECORD 513 (%1001, #201)
00000: 036000 060156 100062 020420 000000 031460 011172 120040
00010: 005000 111577 000000 000052 000440 017000 014710 034001
00020: 000000 011167 031460 011213 040040 005000 000000 111577
00030: 000072 000440 017000 011212 000000 011213 114040 001000
00040: 111564 000002 000000 000440 017000 031460 011204 120040
00050: 000000 005000 111577 000100 000440 017000 000000 031460
00060: 011213 040040 005000 111577 000000 000133 000440 017000
00070: 031460 011212 000000 014040 000000 000000 000000 000000
00100: SAME: TO 000200-1


*T RECORD 514 (%1002, #202)
00000: 036000 060156 021521 020476 000000 005000 111577 000140
00010: 000440 017000 000000 031460 011213 040040 005000 111577
00020: 000000 000173 000440 017000 011212 011213 000000 114040
00030: 001000 111577 000114 000440 000000 017000 076154 034001
00040: 011205 031460 000000 011212 020040 005000 111577 000116
00050: 000000 000440 017000 031460 011212 020040 000000 005000
00060: 111577 000124 000440 017000 000000 031460 011213 120040
00070: 005000 031460 000000 000000 000000 000000 000000 000000
00100: SAME: TO 000200-1


*T RECORD 515 (%1003, #203)
00000: 036000 060156 171061 020554 000000 002040 017000 011237
00010: 011522 054040 000000 002000 031760 127500 000440 017340
00020: 000000 030760 130435 000440 017300 033570 000000 100000
00030: 000450 017000 121571 000000 000000 000500 017040 031760
```

153

```
00040:  011236 042500 000000 005034 043260 011236 050457 005000
00050:  000000 031760 011236 054500 005000 131440 000000 032001
00060:  011223 103477 011236 014457 000000 005000 031471 000000
00070:  000420 015030 000000 031472 000000 000000 000000 000000
00100:  SAME: TO 000200-1


*T RECORD 516 (%1004, #204)
00000:  036000 060156 000455 020632 000000 000000 000500 015300
00010:  031476 000000 000000 000520 015030 031460 000000 000100
00020:  000000 015000 031460 012146 000040 006000 000000 031460
00030:  000000 000040 011000 033760 000000 000000 000416 011000
00040:  033760 000000 000000 000412 011000 033760 000000 000411
00050:  000000 011000 031760 000000 003400 017010 000000 031460
00060:  000000 152040 017000 031460 000000 000000 000040 007000
00070:  041337 034001 000000 011240 000000 000000 000000 000000
00100:  SAME: TO 000200-1


*T RECORD 517 (%1005, #205)
00000:  036000 060156 062330 020710 000000 033471 011634 000457
00010:  006000 043260 000000 000000 006445 017000 043260 000000
00020:  000000 000444 017000 043260 000000 000447 000000 017000
00030:  043260 000000 000457 017000 000000 111577 000377 000440
00040:  017000 011304 000000 011650 120040 002000 121165 011252
00050:  000000 054452 005000 031460 011252 040040 000000 005000
00060:  033760 000377 000457 017000 000000 111577 000361 000440
00070:  017000 121165 000000 011257 000000 000000 000000 000000
00100:  SAME: TO 000200-1


*T RECORD 518 (%1006, #206)
00000:  036000 060156 010060 020766 000000 120447 005000 031460
00010:  011256 014040 000000 005000 043260 000000 000444 017000
00020:  000000 067073 034001 011256 033465 011303 000000 002442
00030:  016000 111577 000364 000440 000000 017000 031460 011266
00040:  014040 005000 000000 111577 000370 000440 017000 121172
00050:  000000 011266 114445 005000 031460 011266 000000 014040
00060:  005000 043577 000003 000444 000000 017000 033465 011303
00070:  000447 016000 000000 111577 000000 000000 000000 000000
00100:  SAME: TO 000200-1


*T RECORD 519 (%1007, #207)
00000:  036000 060156 102306 021044 000000 000360 000440 017000
00010:  121165 011274 000000 120452 005000 031460 011273 040040
00020:  000000 005000 033760 000377 000457 017000 000000 013465
00030:  011303 000443 016000 043260 000000 011303 006444 016000
00040:  120335 022001 000000 011274 111577 000200 000440 017000
00050:  000000 031460 011277 114040 005000 103465 000000 000000
00060:  000445 017000 031760 127476 000000 000440 017340 111577
00070:  000377 000440 000000 017000 000000 000000 000000 000000
00100:  SAME: TO 000200-1


*T RECORD 520 (%1010, #208)
00000:  036000 060156 144002 021122 000000 031460 011303 120040
00010:  005000 023760 000000 000000 000503 017000 031460 011245
00020:  000000 000040 016000 031460 000000 000040 000000 007000
00030:  162633 012001 011305 031460 000000 011424 001040 006000
00040:  031460 011305 000000 120040 005000 023760 000000 005452
00050:  000000 017000 043260 011312 000451 006000 000000 031460
00060:  000000 000040 007000 050113 000000 034001 011312 041576
```

154

```
00070: 017400 002440 000000 017034 000000 000000 000000 000000
00100: SAME: TO 000200-1

*T RECORD 521 (%1011, #209)
00000: 036000 060156 161321 021200 000000 031760 130437 000440
00010: 017360 031760 000000 130440 000440 017300 031472 000000
00020: 000000 000440 017070 031760 130441 000440 000000 017300
00030: 031471 000000 000440 017070 000000 021760 000000 000440
00040: 017030 031760 000000 130436 000440 017360 043260 011330
00050: 000000 150455 005000 031760 127500 000440 000000 017340
00060: 021760 000000 000500 017030 000000 031760 130437 000440
00070: 017360 031760 000000 127476 000000 000000 000000 000000
00100: SAME: TO 000200-1

*T RECORD 522 (%1012, #20A)
00000: 036000 060156 164564 021256 000000 000440 017340 031760
00010: 130436 000440 000000 017360 016605 034001 011330 031460
00020: 000000 011364 000040 006000 011342 011424 000000 154040
00030: 002000 031760 130437 000040 000000 017340 003740 000000
00040: 154111 017000 000000 031760 130436 000040 017340 033760
00050: 000000 011341 054112 005000 031460 011341 000000 150040
00060: 005000 041576 017400 002040 000000 017034 003660 000000
00070: 000111 017000 000000 003075 000000 000000 000000 000000
00100: SAME: TO 000200-1

*T RECORD 523 (%1013, #20B)
00000: 036000 060156 152444 021334 000000 011330 122455 005000
00010: 033760 011363 000000 054434 005000 043260 000000 000441
00020: 000000 017000 041576 017400 002440 017034 000000 030760
00030: 000000 000500 017000 114163 000000 034001 011346 033760
00040: 127510 000440 000000 017340 021760 000000 000500 017030
00050: 000000 010260 000000 000440 017000 101760 000000 011353
00060: 014500 005300 033760 011350 000000 000501 016040 031475
00070: 000000 151440 000000 017000 000000 000000 000000 000000
00100: SAME: TO 000200-1

*T RECORD 524 (%1014, #20C)
00000: 036000 060156 157052 021412 000000 011356 011437 120040
00010: 002000 013475 000000 011354 000455 016000 031474 000000
00020: 000000 003440 017010 031760 130441 000440 000000 017340
00030: 033760 000000 000511 017000 000000 031760 130440 000440
00040: 017340 033760 000000 000000 000512 017000 030472 000000
00050: 000000 000440 007000 033574 002000 130436 000000 000000
00060: 000000 000000 000000 130436 000000 034001 011364 031760
00070: 127500 006440 000000 017340 000000 000000 000000 000000
00100: SAME: TO 000200-1

*T RECORD 525 (%1015, #20D)
00000: 036000 060156 133402 021470 000000 103760 000000 000454
00010: 017000 033760 000000 011372 150507 005000 023760 000000
00020: 000000 000454 017000 041576 017400 002440 000000 017034
00030: 023760 000000 000507 017000 000000 121167 000000 000451
00040: 017000 031460 000000 011401 020040 005000 011401 011402
00050: 000000 154040 002000 031460 011401 054040 000000 005000
00060: 003174 000000 000451 017000 000000 031760 130436 000440
00070: 017340 033760 000000 011372 000000 000000 000000 000000
00100: SAME: TO 000200-1
```

```
*T RECORD 526 (%1016, #20E)
00000: 036000 060156 151702 021546 000000 000512 016000 031460
00010: 000000 000040 000000 007000 132032 034001 011402 033471
00020: 000000 011634 000457 006000 043260 000000 000000 000446
00030: 017000 043260 000000 000457 000000 017000 111577 000377
00040: 000440 017000 000000 011423 011650 120040 002000 111577
00050: 000000 000361 000440 017000 031460 011417 000000 120040
00060: 005000 121166 011413 050452 000000 005000 011414 011417
00070: 040040 001000 000000 031460 000000 000000 000000 000000
00100: SAME: TO 000200-1

*T RECORD 527 (%1017, #20F)
00000: 036000 060156 056641 021624 000000 011415 114040 005000
00010: 030466 000000 000000 002440 017000 031460 011417 050040
00020: 000000 005000 033760 000377 000457 017000 000000 111577
00030: 000200 000440 017000 135130 000000 010001 011420 031460
00040: 011422 114040 000000 005000 103466 000000 000446 017000
00050: 000000 031460 011405 000040 016000 033260 000000 000000
00060: 000452 007000 044775 026001 000000 011424 031460 011730
00070: 000040 006000 000000 031760 000000 000000 000000 000000
00100: SAME: TO 000200-1

*T RECORD 528 (%1020, #210)
00000: 036000 060156 145134 021702 000000 127500 000440 017340
00010: 033760 000000 000000 000507 017000 041576 017400 002440
00020: 000000 017034 043260 000000 000446 017000 000000 113567
00030: 000000 002507 017000 121166 000000 000000 000447 017000
00040: 011436 011437 000000 120040 002000 031460 011436 154040
00050: 000000 005000 103466 011432 000446 016000 000000 030466
00060: 000000 000440 007000 011445 000000 034001 011437 041576
00070: 000120 006440 000000 017000 000000 000000 000000 000000
00100: SAME: TO 000200-1

*T RECORD 529 (%1021, #211)
00000: 036000 060156 131311 021760 000000 031460 011477 120440
00010: 005340 033760 000000 000000 000505 017340 031461 000000
00020: 000000 000440 017300 033760 011452 020504 000000 005140
00030: 033760 000000 000505 017300 000000 031464 011447 020440
00040: 005030 031460 000000 000000 000040 017060 031464 000000
00050: 000000 000440 017300 031465 011452 020440 000000 005030
00060: 031460 000000 000040 017160 000000 031465 011456 050440
00070: 005300 031460 000000 011462 000000 000000 000000 000000
00100: SAME: TO 000200-1

*T RECORD 530 (%1022, #212)
00000: 036000 060156 134735 022036 000000 020040 005140 033465
00010: 000000 000444 000000 017000 030521 034001 011455 033760
00020: 000000 011462 000505 016000 031464 000000 000000 000440
00030: 017300 031460 011462 020040 000000 005040 033464 000000
00040: 000445 017000 000000 033760 000000 000104 017000 031461
00050: 000000 000000 122440 017300 031465 011474 000000 020440
00060: 005030 031460 011467 020040 000000 005160 031461 000000
00070: 000440 017030 000000 031465 000000 000000 000000 000000
00100: SAME: TO 000200-1

*T RECORD 531 (%1023, #213)
00000: 036000 060156 007114 022114 000000 000000 000440 017360
00010: 031460 000000 000000 000440 017340 031760 000000 000500
```

```
00020: 000000 017300 031464 000000 000440 017070 000000 031760
00030: 011477 020520 005030 153571 000000 012001 011473 101464
00040: 011477 000440 000000 016360 031465 000000 000440 017030
00050: 000000 031460 011477 020440 005300 031460 000000 000000
00060: 000040 017060 031460 000000 000000 000040 007000 017512
00070: 034001 011500 000000 103760 000000 000000 000000 000000
00100: SAME: TO 000200-1


*T RECORD 532 (%1024, #214)
00000: 036000 060156 166411 022172 000000 000000 002514 017000
00010: 033760 000377 000000 000453 017000 033260 011634 000457
00020: 000000 006000 033260 000000 000457 017000 000000 041576
00030: 000002 000440 017000 011521 000000 011701 020040 002000
00040: 011521 011650 000000 054040 002000 111577 000200 000440
00050: 000000 017000 031460 011514 114040 005000 000000 013474
00060: 000000 000454 017000 031460 000000 011514 120040 005000
00070: 033477 011515 000000 000453 000000 000000 000000 000000
00100: SAME: TO 000200-1


*T RECORD 533 (%1025, #215)
00000: 036000 060156 101233 022250 000000 016000 030477 011747
00010: 000440 006000 000000 041576 000001 000440 017000 152066
00020: 000000 010001 011516 031460 011520 120040 000000 005000
00030: 031460 011506 150040 005000 000000 031460 011506 006040
00040: 016000 031460 000000 000000 000040 007000 152152 034001
00050: 000000 011522 111577 000200 002440 017000 000000 033477
00060: 011525 014453 005000 033576 000000 100000 000456 017000
00070: 053576 000014 000000 000456 000000 000000 000000 000000
00100: SAME: TO 000200-1


*T RECORD 534 (%1026, #216)
00000: 036000 060156 115565 022326 000000 017000 043260 000000
00010: 000450 017000 000000 033471 011634 000457 006000 033471
00020: 000000 011701 000457 006000 043260 011611 000000 050454
00030: 005000 011611 011650 054040 000000 002000 121174 000000
00040: 000452 017000 000000 030477 011552 140440 005000 111660
00050: 000000 000340 000440 017000 031460 011552 000000 014040
00060: 005000 111660 000360 000440 000000 017000 072750 034001
00070: 011540 031460 000000 011544 000000 000000 000000 000000
00100: SAME: TO 000200-1


*T RECORD 535 (%1027, #217)
00000: 036000 060156 007601 022404 000000 114040 005000 043570
00010: 177760 000450 000000 017000 043660 000017 000457 017000
00020: 000000 003177 011552 000450 016000 043660 000000 000374
00030: 000457 017000 111577 000370 000000 000440 017000 031460
00040: 011552 120040 000000 005000 043570 147777 000450 017000
00050: 000000 041660 000003 001440 017034 003570 000000 000000
00060: 000510 017000 111660 000377 000000 000440 017000 121174
00070: 011561 120452 000000 005000 000000 000000 000000 000000
00100: SAME: TO 000200-1


*T RECORD 536 (%1030, #218)
00000: 036000 060156 140311 022462 000000 031460 011561 114040
00010: 005000 030760 000000 000040 000440 017000 016764 034001
00020: 000000 011556 041570 000017 000440 017000 000000 031460
00030: 011561 020040 005000 033576 000000 000010 000456 017000
00040: 121174 000000 000000 000452 017000 033260 011600 120455
```

157

00050: 000000 005000 111660 000200 000440 017000 000000 031460
00060: 011567 014040 005000 111660 000000 000377 000440 017000
00070: 031460 011600 000000 120040 000000 000000 000000 000000
00100: SAME: TO 000200-1


*T RECORD 537 (%1031, #219)
00000: 036000 060156 142152 022540 000000 005000 030473 000000
00010: 000440 017000 000000 031476 000000 000440 017000 011600
00020: 000000 011747 014040 002000 111573 000200 000000 000440
00030: 017000 030475 011575 114440 000000 005000 033170 034001
00040: 011574 103474 000000 000000 000454 017000 111660 000377
00050: 000000 000440 017000 031460 011600 120040 000000 005000
00060: 033576 000004 000456 017000 000000 011604 011747 150040
00070: 002000 111660 000000 000200 000000 000000 000000 000000
00100: SAME: TO 000200-1


*T RECORD 538 (%1032, #21A)
00000: 036000 060156 016056 022616 000000 000440 017000 031460
00010: 011604 114040 000000 005000 103474 000000 000454 017000
00020: 000000 041576 000001 000440 017000 031460 000000 011607
00030: 120040 005000 031460 011610 000000 150040 005000 031460
00040: 000000 006040 000000 017000 031460 011532 000040 016000
00050: 000000 041576 000010 000440 017000 105070 000000 034001
00060: 011612 043576 100004 122457 000000 017000 003177 011626
00070: 114457 005000 000000 031460 000000 000000 000000 000000
00100: SAME: TO 000200-1


*T RECORD 539 (%1033, #21B)
00000: 036000 060156 032417 022674 000000 011626 120040 005000
00010: 111573 000200 000000 000440 017000 031460 011625 014040
00020: 000000 005000 043573 000360 000457 017000 000000 111577
00030: 000340 000440 017000 031460 000000 011625 020040 005000
00040: 043573 000374 000000 000457 017000 111577 000370 000440
00050: 000000 017000 031460 011626 120040 005000 000000 031460
00060: 000000 002040 017000 031760 000000 127500 000440 017340
00070: 031760 127576 000000 000440 000000 000000 000000 000000
00100: SAME: TO 000200-1


*T RECORD 540 (%1034, #21C)
00000: 036000 060156 011517 022752 000000 017300 056124 010001
00010: 011630 121571 000000 011633 154500 005040 001571 011633
00020: 000000 040500 005300 021760 000000 000440 000000 017070
00030: 031460 000000 000040 007000 000000 112670 030001 011634
00040: 031760 127510 000000 000440 017340 033760 000000 000500
00050: 000000 017000 031477 000000 000440 017000 000000 101460
00060: 011642 020440 005340 033760 000000 000000 000500 017000
00070: 013477 011636 000000 120457 000000 000000 000000 000000
00100: SAME: TO 000200-1


*T RECORD 541 (%1035, #21D)
00000: 036000 060156 161703 023030 000000 005000 033760 000012
00010: 000441 017000 000000 033576 000002 000456 017000 031460
00020: 000000 000000 000440 017000 031460 011647 000000 020040
00030: 005000 053576 000002 000456 000000 017000 031460 000000
00040: 000040 007000 000000 154577 034001 011650 033760 000377
00050: 000000 000457 017000 041576 000002 000440 000000 017000
00060: 051177 011675 120441 005000 000000 031461 011671 120440
00070: 005000 031460 000000 011662 000000 000000 000000 000000

```
00100: SAME: TO 000200-1

*T RECORD 542 (%1036, #21E)
00000: 036000 060156 117077 023106 000000 120040 005000 001560
00010: 000007 000440 000000 017340 031760 000000 000500 017000
00020: 000000 031461 011662 020440 005000 033760 000000 000000
00030: 000500 017000 033760 000016 000000 000441 017000 011664
00040: 012130 120040 000000 002000 013461 000000 000441 017000
00050: 000000 111577 000200 002440 017034 031460 000000 011671
00060: 014040 005000 076212 026001 000000 011666 121577 000340
00070: 000440 017000 000000 031760 000000 000000 000000 000000
00100: SAME: TO 000200-1

*T RECORD 543 (%1037, #21F)
00000: 036000 060156 117013 023164 000000 011671 040500 005000
00010: 003561 011650 000000 020501 005000 041561 177400 000440
00020: 000000 017000 031460 011675 020040 005000 000000 033760
00030: 000040 000457 017000 113561 000000 000400 000441 017000
00040: 111577 000377 000000 000440 017000 031460 011700 120040
00050: 000000 005000 033576 000002 000456 017000 000000 031477
00060: 000000 000440 007030 147672 000000 016001 011701 031460
00070: 011710 000040 000000 006000 000000 000000 000000 000000
00100: SAME: TO 000200-1

*T RECORD 544 (%1040, #220)
00000: 036000 060156 034030 023242 000000 031760 127476 000440
00010: 017340 033760 000000 000012 000443 017000 053576 000001
00020: 000000 000456 017000 033760 000000 000507 000000 017000
00030: 023760 000000 000445 017000 000000 023166 000000 000446
00040: 007000 005671 000000 034001 011710 031460 000000 000440
00050: 000000 017030 103477 000000 000517 015000 000000 023760
00060: 127510 005442 017000 033462 000000 011726 050440 005300
00070: 013477 000000 000000 000457 000000 000000 000000 000000
00100: SAME: TO 000200-1

*T RECORD 545 (%1041, #221)
00000: 036000 060156 130663 023320 000000 017140 031760 011726
00010: 014500 005000 000000 011725 012036 020040 002000 101460
00020: 000000 011713 050440 005300 033760 000000 000000 000502
00030: 017060 031460 000000 000440 000000 017030 031462 000000
00040: 000440 017360 000000 041260 000000 000440 017170 021160
00050: 000000 011713 000440 016170 033760 011713 000000 000502
00060: 016000 126346 004001 011726 000000 031460 000000 000040
00070: 011000 033760 000000 000000 000000 000000 000000 000000
00100: SAME: TO 000200-1

*T RECORD 546 (%1042, #222)
00000: 036000 060156 042215 023376 000000 000400 007000 120026
00010: 034001 011730 000000 043260 000000 000441 017000 041576
00020: 000000 017400 002440 017034 033760 000000 000000 000517
00030: 017000 033760 127510 000440 000000 017340 013477 000000
00040: 000457 017000 000000 030760 011746 014500 005040 011744
00050: 000000 012036 020040 002000 101461 000000 000000 000440
00060: 017360 031760 000000 000500 000000 017300 031461 000000
00070: 000440 017070 000000 041260 000000 000000 000000 000000
00100: SAME: TO 000200-1

*T RECORD 547 (%1043, #223)
```

```
00000: 036000 060156 004155 023454 000000 000000 000440 017170
00010: 021760 000000 000000 000500 017170 033260 000000 000441
00020: 000000 017000 101461 011734 000440 016340 000000 042050
00030: 002001 011746 031460 000000 000000 000040 007000 052466
00040: 032001 011747 000000 031260 000000 005440 017030 031476
00050: 000000 000000 000500 015000 031460 011762 000000 044040
00060: 005000 111660 000200 000440 000000 017000 013447 000000
00070: 114047 017000 000000 011762 000000 000000 000000 000000
00100: SAME: TO 000200-1

*T RECORD 548 (%1044, #224)
00000: 036000 060156 040313 023532 000000 012001 120040 002000
00010: 031460 011762 000000 050040 005000 111566 000377 000440
00020: 000000 017000 031467 011761 020440 005000 000000 031460
00030: 011762 120040 005000 103476 000000 011764 000456 006000
00040: 031460 000000 000000 000040 011000 030760 000000 000400
00050: 000000 007000 105501 032001 011764 030760 000000 000377
00060: 000440 017000 031460 012001 000000 000040 006000 031460
00070: 011773 050040 000000 005000 000000 000000 000000 000000
00100: SAME: TO 000200-1

*T RECORD 549 (%1045, #225)
00000: 036000 060156 011271 023610 000000 030760 000377 000440
00010: 017000 031460 000000 012001 000040 006000 030760 000377
00020: 000000 000440 017000 031460 012001 150040 000000 006000
00030: 001562 000007 000440 017340 000000 031760 000000 000500
00040: 017000 012000 000000 012117 120040 002000 041260 000000
00050: 000000 000440 017030 001562 000007 000440 000000 017360
00060: 031460 000000 000040 007000 000000 077470 032001 012001
00070: 111660 000040 000000 005440 000000 000000 000000 000000
00100: SAME: TO 000200-1

*T RECORD 550 (%1046, #226)
00000: 036000 060156 026741 023666 000000 017000 031460 012011
00010: 120040 005000 000000 030760 000201 000440 017000 111566
00020: 000000 000200 000440 017000 031460 012011 000000 014040
00030: 005000 121566 000340 000440 000000 017000 031460 012011
00040: 040040 005000 000000 103466 012015 000446 016000 031465
00050: 000000 000000 000440 017030 033466 000000 000000 000045
00060: 017000 033260 000000 000046 000000 017000 031460 012016
00070: 114040 006000 000000 031460 000000 000000 000000 000000
00100: SAME: TO 000200-1

*T RECORD 551 (%1047, #227)
00000: 036000 060156 145436 023744 000000 000000 000040 007000
00010: 063316 034001 000000 012016 030760 000377 005440 017000
00020: 000000 031463 000000 000500 015000 121660 000000 012031
00030: 120500 005000 031460 012031 000000 020040 005000 001562
00040: 000007 000440 000000 017340 030760 000000 000500 017000
00050: 000000 031460 012036 020040 006000 031460 000000 012031
00060: 050040 005000 001562 000007 000000 000440 017360 033260
00070: 000000 000442 000000 017000 000000 000000 000000 000000
00100: SAME: TO 000200-1

*T RECORD 552 (%1050, #228)
00000: 036000 060156 001132 024022 000000 033760 000016 000443
00010: 017000 031463 000000 000000 000440 011000 031760 012035
00020: 000000 020400 005030 012035 012135 150040 000000 002000
```

```
00030: 121420 004001 012034 013463 000000 000000 000443 017000
00040: 031460 000000 000000 000040 007000 105702 034001 012036
00050: 000000 031760 127504 000440 017340 031760 000000 000000
00060: 000500 017000 120160 012104 000000 120440 005000 041576
00070: 037400 003440 000000 017035 000000 000000 000000 000000
00100: SAME: TO 000200-1


*T RECORD 553 (%1051, #229)
00000: 036000 060156 060654 024100 000000 021760 000000 000500
00010: 017000 100260 000000 012104 020440 005000 031760 127512
00020: 000000 000440 017340 031760 000000 000500 000000 017340
00030: 031760 000000 000500 017000 000000 010260 012045 120440
00040: 005100 020760 000000 012054 020520 005040 031760 000000
00050: 000000 000500 017000 031760 012103 020500 000000 005300
00060: 041260 012103 000440 016070 000000 106476 034001 012054
00070: 031760 127526 000000 000440 000000 000000 000000 000000
00100: SAME: TO 000200-1


*T RECORD 554 (%1052, #22A)
00000: 036000 060156 126162 024156 000000 017340 100760 000000
00010: 000500 017000 000000 031760 127512 000440 017340 101760
00020: 000000 000000 000500 017340 031760 000000 000000 000500
00030: 017000 010260 012057 120440 000000 005000 020760 012073
00040: 014520 005000 000000 031760 127512 000440 017340 030760
00050: 000000 000000 000500 017000 001660 000007 000000 000440
00060: 017340 031760 000000 000500 000000 017000 031460 012101
00070: 120040 005000 000000 101260 000000 000000 000000 000000
00100: SAME: TO 000200-1


*T RECORD 555 (%1053, #22B)
00000: 036000 060156 022401 024234 000000 000000 000440 017340
00010: 030760 000000 000000 000500 017000 106530 034001 012072
00020: 000000 012104 012065 120040 001000 001660 000000 000007
00030: 000440 017340 031760 000000 000000 000500 017000 031460
00040: 012101 120040 000000 005000 031260 000000 000440 017340
00050: 000000 101760 000000 000500 017300 041260 000000 012103
00060: 000440 016070 030760 000000 000000 000500 017000 041260
00070: 000000 000440 000000 017070 000000 000000 000000 000000
00100: SAME: TO 000200-1


*T RECORD 556 (%1054, #22C)
00000: 036000 060156 053364 024312 000000 031260 012117 000440
00010: 006030 031760 000000 127504 001440 017340 030760 000000
00020: 000000 000500 017000 031460 012112 120040 000000 005000
00030: 100760 000000 000440 017000 000000 121263 016001 012110
00040: 031460 012223 000000 000040 006000 120160 012116 000440
00050: 000000 016000 001660 000007 000440 017340 000000 031760
00060: 127504 000440 017360 041260 000000 000000 005440 017030
00070: 001660 000007 000000 000440 000000 000000 000000 000000
00100: SAME: TO 000200-1


*T RECORD 557 (%1055, #22D)
00000: 036000 060156 123707 024370 000000 017360 031260 000000
00010: 000440 007030 000000 031233 022001 012117 030760 000000
00020: 000000 000500 015000 001660 000007 000440 000000 017340
00030: 030760 000000 000500 017000 000000 031460 012120 120040
00040: 005000 030760 000000 000000 000520 017000 031760 127504
00050: 000000 000440 017340 031260 000000 000440 000000 011360
```

```
00060: 031760 127504 000440 017300 000000 031760 000000 000400
00070: 007070 124566 000000 012001 000000 000000 000000 000000
00100: SAME: TO 000200-1


*T RECORD 558 (%1056, #22E)
00000: 036000 060156 110351 024446 000000 012130 125561 000016
00010: 000457 017003 000000 001160 012133 030457 005340 031760
00020: 000000 000000 002500 017034 033760 000377 000000 000457
00030: 017000 043577 000000 000517 000000 007030 034063 022001
00040: 012135 030760 000000 000377 000440 017000 125563 000016
00050: 000000 000457 017003 001162 012142 030457 000000 005300
00060: 031760 000000 002500 017034 000000 030760 177400 000440
00070: 017000 043660 000000 000000 000000 000000 000000 000000
00100: SAME: TO 000200-1


*T RECORD 559 (%1057, #22F)
00000: 036000 060156 135776 024524 000000 000517 017040 060660
00010: 177777 000440 000000 017000 041660 000000 000500 017030
00020: 000000 001577 000000 000500 007070 104453 000000 034001
00030: 012146 031760 127574 000440 000000 017340 033760 000000
00040: 000500 017000 000000 031760 127474 000440 017340 033760
00050: 000000 000000 000501 017000 031760 127472 000000 000440
00060: 017340 033760 000000 000502 000000 017000 031760 127470
00070: 000440 017340 000000 031760 000000 000000 000000 000000
00100: SAME: TO 000200-1


*T RECORD 560 (%1060, #230)
00000: 036000 060156 044323 024602 000000 130442 000440 017360
00010: 031472 000000 000000 003440 017035 121572 000000 000500
00020: 000000 017030 001562 000000 000500 017170 000000 031471
00030: 000000 003440 017037 001571 000000 000000 003500 017036
00040: 001561 000000 000000 000500 017170 007360 014001 012164
00050: 000000 031477 000000 000440 017170 001170 000000 000000
00060: 000440 017170 031260 000000 000000 000440 017170 033760
00070: 130442 000440 000000 017000 000000 000000 000000 000000
00100: SAME: TO 000200-1


*T RECORD 561 (%1061, #231)
00000: 036000 060156 077654 024660 000000 031460 013031 000040
00010: 006000 031460 000000 000000 000040 007000 075216 004000
00020: 000000 130442 000000 000000 000000 000000 000000 000000
00030: 000000 000006 000140 130610 000000 034001 012172 041576
00040: 000020 000440 000000 017000 031460 012217 120040 005000
00050: 000000 031760 127524 000440 017340 030760 000000 000000
00060: 003500 017035 123660 000000 000000 000512 017000 003572
00070: 110000 000452 000000 017000 000000 000000 000000 000000
00100: SAME: TO 000200-1


*T RECORD 562 (%1062, #232)
00000: 036000 060156 154000 024736 000000 031760 127526 000440
00010: 017340 031760 000000 000000 003500 017036 030760 000000
00020: 000000 003500 017037 003660 000012 000454 000000 017000
00030: 003574 012262 000514 006000 000000 031760 127470 000440
00040: 017340 075760 000000 000000 000517 017000 031460 012446
00050: 000000 000040 006000 034126 020001 012210 000000 030760
00060: 000000 000500 017000 043077 000000 000000 000457 017000
00070: 030760 000007 000000 000440 000000 000000 000000 000000
00100: SAME: TO 000200-1
```

```
*T RECORD 563 (%1063, #233)
00000: 036000 060156 027563 025014 000000 017000 021760 130455
00010: 000440 017300 000000 010260 000000 000440 017140 061577
00020: 000000 012214 120500 005070 031460 012274 000000 000040
00030: 006000 031460 000000 000040 000000 007000 175111 034001
00040: 012220 031760 000000 000002 000440 017300 031460 012224
00050: 000000 000040 016000 121160 012224 000440 000000 016300
00060: 031760 000006 000440 017300 000000 031477 000000 000420
00070: 015030 031474 000000 000000 000000 000000 000000 000000
00100: SAME: TO 000200-1

*T RECORD 564 (%1064, #234)
00000: 036000 060156 055540 025072 000000 000500 015030 031472
00010: 000000 000500 000000 015030 031460 000000 000100 015000
00020: 000000 033760 000000 000537 017000 001660 000000 130451
00030: 000440 017340 033760 000000 000000 000512 017000 031760
00040: 127500 000440 000000 017340 033760 000000 003514 017037
00050: 000000 007574 000000 000514 017000 040262 000000 020001
00060: 012236 037474 012246 000454 000000 006000 103474 012246
00070: 000454 006000 000000 103474 000000 000000 000000 000000
00100: SAME: TO 000200-1

*T RECORD 565 (%1065, #235)
00000: 036000 060156 046717 025150 000000 012246 000454 006000
00010: 031460 000000 000000 000040 011000 033760 000000 000412
00020: 000000 011000 033760 000000 000414 011000 000000 033760
00030: 000000 000417 011000 031760 000000 000000 003400 007010
00040: 033405 001400 000000 130452 000310 000620 000012 131614
00050: 000000 030001 012246 041576 000020 000440 000000 017000
00060: 012261 012262 020040 002000 000000 031460 012446 000040
00070: 006000 043577 000000 000000 000000 000000 000000 000000
00100: SAME: TO 000200-1

*T RECORD 566 (%1066, #236)
00000: 036000 060156 124727 025226 000000 000517 017000 073760
00010: 000000 000513 000000 017000 030760 000007 000440 017000
00020: 000000 021760 130455 000440 017300 010260 000000 000000
00030: 000440 017140 041573 012260 000000 014500 005030 061577
00040: 012255 000500 000000 016070 031460 012274 000040 006000
00050: 000000 031460 000000 000040 007000 032035 000000 024001
00060: 012262 031460 012415 000040 000000 006000 031460 012425
00070: 000040 006000 000000 030760 000000 000000 000000 000000
00100: SAME: TO 000200-1

*T RECORD 567 (%1067, #237)
00000: 036000 060156 023510 025304 000000 000041 005440 017000
00010: 031460 012343 000000 002040 006000 030760 000007 000440
00020: 000000 017000 021760 130455 000440 017300 000000 031760
00030: 040000 014440 017740 010260 000000 000000 000440 017160
00040: 012270 012441 000000 020040 002000 031460 000000 000040
00050: 000000 007000 021545 024001 012274 031460 000000 012415
00060: 000040 006000 031460 012425 000000 000040 006000 030760
00070: 002041 005440 000000 017000 000000 000000 000000 000000
00100: SAME: TO 000200-1

*T RECORD 568 (%1070, #238)
00000: 036000 060156 006376 025362 000000 031460 012343 002040
```

```
00010: 006000 030760 000000 000007 000440 017000 031760 130455
00020: 000000 000440 017340 031760 040000 014440 000000 017760
00030: 010260 000000 000440 017140 000000 012302 012441 020040
00040: 002000 031460 000000 000000 000040 007000 033631 034001
00050: 000000 012306 031260 000000 000420 015300 000000 037460
00060: 000000 000455 017000 003160 000000 000000 000455 017000
00070: 007175 000000 000000 000535 000000 000000 000000 000000
00100: SAME: TO 000200-1


*T RECORD 569 (%1071, #239)
00000: 036000 060156 151527 025440 000000 015000 033760 177764
00010: 000453 017000 000000 043260 012315 050457 005000 033760
00020: 000000 000014 000453 017000 033760 000002 000000 000457
00030: 017000 031760 127470 000440 000000 017340 111577 000040
00040: 000440 017000 000000 041577 012340 020500 005000 033475
00050: 000000 012337 120454 005000 061577 000036 000000 001440
00060: 017035 033760 012415 000512 000000 006000 156414 034001
00070: 012324 033760 000000 000006 000000 000000 000000 000000
00100: SAME: TO 000200-1


*T RECORD 570 (%1072, #23A)
00000: 036000 060156 067261 025516 000000 000451 017000 013471
00010: 000000 000451 000000 017000 012336 012425 114040 002000
00020: 000000 030760 100001 002440 017000 003173 000000 012343
00030: 001454 006000 031460 012425 000000 000040 006000 030760
00040: 042001 006440 000000 017000 113173 012343 001454 006000
00050: 000000 003574 000002 000454 017000 031460 000000 012325
00060: 000040 016000 031460 012441 000000 000040 006000 003177
00070: 012316 000457 000000 016000 000000 000000 000000 000000
00100: SAME: TO 000200-1


*T RECORD 571 (%1073, #23B)
00000: 036000 060156 007112 025574 000000 031460 000000 000040
00010: 011000 030760 000000 000000 000400 011000 134777 002001
00020: 000000 012342 031760 000000 003400 007010 000000 056732
00030: 034001 012343 031461 000000 000000 000440 017030 031462
00040: 000000 000500 000000 015030 031460 000000 000100 015000
00050: 000000 031760 041400 000440 017700 031760 000000 100001
00060: 014440 017470 033760 004170 000000 000441 017000 033760
00070: 004161 000442 000000 017000 000000 000000 000000 000000
00100: SAME: TO 000200-1


*T RECORD 572 (%1074, #23C)
00000: 036000 060156 173266 025652 000000 041660 003720 000440
00010: 017000 031460 000000 012356 120040 005000 033760 016050
00020: 000000 000441 017000 033760 016041 000442 000000 017000
00030: 031760 001007 000440 017340 000000 031760 000000 000500
00040: 017000 031460 000000 012365 020040 005000 122441 034001
00050: 000000 012361 031462 000000 000440 017030 000000 033760
00060: 000400 000441 017000 033760 000000 150000 000442 017000
00070: 031460 012370 000000 000040 000000 000000 000000 000000
00100: SAME: TO 000200-1


*T RECORD 573 (%1075, #23D)
00000: 036000 060156 002123 025730 000000 016000 031461 000000
00010: 000440 017030 000000 033760 004000 000441 017000 033760
00020: 000000 160000 000442 017000 001720 043000 000000 014440
00030: 017760 031760 043400 000440 000000 017700 031760 000042
```

```
00040: 014440 017470 000000 001561 000022 000440 017700 041660
00050: 000000 037777 000440 017035 001700 000000 000000 003500
00060: 017037 001700 000000 014500 000000 017470 165422 034001
00070: 012377 041660 000000 037777 000000 000000 000000 000000
00100: SAME: TO 000200-1


*T RECORD 574 (%1076, #23E)
00000: 036000 060156 137337 026006 000000 014440 017570 001561
00010: 000004 000440 000000 017700 031472 000000 014440 017470
00020: 000000 001700 000000 003440 017036 001740 000000 000000
00030: 153500 017035 021700 000000 000000 014500 017570 031174
00040: 000000 014442 000000 017570 001700 000001 014440 017570
00050: 000000 001561 000032 000440 017760 031760 000000 041400
00060: 000440 017700 041660 140000 000000 017440 017477 031460
00070: 000000 000040 000000 011000 000000 000000 000000 000000
00100: SAME: TO 000200-1


*T RECORD 575 (%1077, #23F)
00000: 036000 060156 010750 026064 000000 033760 000000 000402
00010: 011000 033760 000000 000000 000401 007000 056374 020001
00020: 000000 012415 031460 000000 000040 037170 000000 031460
00030: 000000 000040 017000 031460 000000 000000 000040 037150
00040: 031760 000076 000000 000440 017340 031760 000000 000500
00050: 000000 017000 031460 012415 120040 005000 000000 031760
00060: 100000 000440 017070 031460 000000 000000 000040 027170
00070: 014250 030001 000000 012425 000000 000000 000000 000000
00100: SAME: TO 000200-1


*T RECORD 576 (%1100, #240)
00000: 036000 060156 063341 026142 000000 030760 004000 000440
00010: 017000 031760 000000 001007 000440 017340 031760 000000
00020: 000000 000500 017000 031460 012432 020040 000000 005000
00030: 030760 000400 000440 017000 000000 031460 000000 000040
00040: 037170 031460 000000 000000 000040 017000 031460 000000
00050: 000000 000040 037150 031760 000076 000440 000000 017340
00060: 041660 000000 000500 017000 000000 031660 012432 120500
00070: 005070 031460 000000 000000 000000 000000 000000 000000
00100: SAME: TO 000200-1


*T RECORD 577 (%1101, #241)
00000: 033400 060152 117133 026220 000000 000040 027170 016676
00010: 022001 012441 000000 031460 000000 000040 037150 031760
00020: 000000 000076 000440 017340 030760 077777 000000 000440
00030: 017000 041660 000000 000500 000000 017070 031460 000000
00040: 000040 027170 000000 031760 001007 000440 017340 031760
00050: 000000 000000 000500 017000 001740 130450 000000 120440
00060: 017340 031460 000000 000040 000000 007000 150205 000000
00070: SAME: TO 000200-1


*T RECORD 578 (%1102, #242)
00000: 002000 120000 120000 000000 000000 000000 000000 000000
00010: SAME: TO 000200-1


*T RECORD 579 (%1103, #243)
00000: 025000 020000 044554 077115 047114 050040 002005 000000
00010: SAME: TO 000020-1
00020: 000000 020111 046501 043505 051040 046501 044516 020114
00030: 047517 050040 026440 036071 030060 031462 034456 031063
```

165

```
00040: 032071 037040 020040 020040 020040 020040 020040 020040
00050: 020040 020040 000000 000000 000000 000000 000000 000000
00060: SAME: TO 000200-1


*T RECORD 580 (%1104, #244)
00000: 003400 040001 056232 077115 047114 050000 000000 000000
00010: SAME: TO 000200-1


*T RECORD 581 (%1105, #245)
00000: 036000 060156 072374 000000 000000 002004 034001 012452
00010: 031460 012477 000000 000040 006000 031460 012544 000040
00020: 000000 006000 031460 012722 000040 006000 000000 031460
00030: 023055 000040 006000 031460 000000 012610 000040 006000
00040: 031460 012744 000000 000040 006000 031460 012747 000040
00050: 000000 006000 031460 022510 000040 006000 000000 031460
00060: 020177 000040 006000 031460 000000 020133 000040 006000
00070: 031460 004330 000000 000040 000000 000000 000000 000000
00100: SAME: TO 000200-1


*T RECORD 582 (%1106, #246)
00000: 036000 060156 136076 000056 000000 006000 031460 015713
00010: 000040 006000 000000 031460 004036 000040 006000 031460
00020: 000000 013001 000040 006000 156143 034001 000000 012470
00030: 031460 013005 000040 006000 000000 031460 013012 000040
00040: 006000 031460 000000 013017 000040 006000 031460 005366
00050: 000000 000040 006000 031460 024542 000040 000000 006000
00060: 031460 020144 000040 006000 000000 031460 012452 000040
00070: 016000 031760 000000 101410 000000 000000 000000 000000
00100: SAME: TO 000200-1


*T RECORD 583 (%1107, #247)
00000: 036000 060156 111265 000134 000000 000440 017340 030760
00010: 000077 000440 000000 017000 031760 000000 000500 017000
00020: 000000 043660 000000 114500 007000 041260 000000 000000
00030: 000440 017070 031760 001000 000000 000440 017340 031760
00040: 000000 000500 000000 017000 000773 034001 012506 031460
00050: 000000 012505 120040 005040 031460 000000 000000 000440
00060: 017030 031760 000101 000440 000000 017360 033760 000064
00070: 000440 017000 000000 031560 000000 000000 000000 000000
00100: SAME: TO 000200-1


*T RECORD 584 (%1110, #248)
00000: 036000 060156 155445 000212 000000 000000 000500 017030
00010: 031760 000102 000000 000440 017360 031460 000000 000040
00020: 000000 007000 031760 101402 000440 017340 000000 033760
00030: 000377 000441 017000 030760 000000 177400 000440 017000
00040: 043561 000000 000000 000501 017000 041260 000000 021440
00050: 000000 007070 041561 000200 000440 017000 000000 031460
00060: 000000 022040 007000 010157 000000 034001 012524 033061
00070: 000000 000441 000000 007000 000000 000000 000000 000000
00100: SAME: TO 000200-1


*T RECORD 585 (%1111, #249)
00000: 036000 060156 071010 000270 000000 031760 145701 000440
00010: 017340 030760 000000 000000 000500 017140 003740 000000
00020: 000000 120457 017000 111760 000000 000500 000000 017030
00030: 031760 130470 000040 017360 000000 003457 000000 120457
00040: 017000 031760 000000 130467 000440 017300 031260 000000
```

166

```
00050: 000000 000440 017070 031760 130471 000440 000000 017340
00060: 031760 000000 000500 017000 000000 023760 012542 020512
00070: 005000 041260 000000 000000 000000 000000 000000 000000
00100: SAME: TO 000200-1


*T RECORD 586 (%1112, #24A)
00000: 036000 060156 050747 000346 000000 000440 017030 001572
00010: 130467 000440 000000 017360 057601 034001 012542 031760
00020: 000000 145701 000440 017360 031460 000000 000000 000040
00030: 007160 031760 130472 000440 000000 017300 041260 012525
00040: 000440 006070 000000 031460 012515 000040 006000 001457
00050: 000000 000000 150440 017000 031460 000000 000000 020040
00060: 007000 101760 000000 000440 000000 017030 031760 130472
00070: 000440 017360 000000 031460 000000 000000 000000 000000
00100: SAME: TO 000200-1


*T RECORD 587 (%1113, #24B)
00000: 036000 060156 047666 000424 000000 012556 000040 006000
00010: 031460 012625 000000 150040 006000 031460 000000 000040
00020: 000000 007000 031477 000000 000440 017000 000000 031460
00030: 000000 020040 007000 120212 000000 034001 012560 031760
00040: 130470 000440 000000 017340 031760 146067 000440 017360
00050: 000000 033760 000000 000500 017000 031760 000000 146071
00060: 000440 017340 001560 000000 000000 000500 017070 031760
00070: 130467 000440 000000 017340 000000 000000 000000 000000
00100: SAME: TO 000200-1


*T RECORD 588 (%1114, #24C)
00000: 036000 060156 003362 000502 000000 031760 146070 000440
00010: 017360 033760 000000 000000 000500 017000 031760 146072
00020: 000000 000440 017340 001560 000000 000500 000000 017070
00030: 031460 000000 000040 017140 000000 121560 000000 000500
00040: 017070 031760 000000 101377 000440 017340 031760 000000
00050: 000000 000500 017000 151550 034001 012576 000000 031460
00060: 012614 120040 005000 031460 000000 000000 000020 015000
00070: 031760 012776 000000 000440 000000 000000 000000 000000
00100: SAME: TO 000200-1


*T RECORD 589 (%1115, #24D)
00000: 036000 060156 161244 000560 000000 017030 031460 017765
00010: 000040 006000 000000 031760 012776 000440 017030 031460
00020: 000000 017774 000040 006000 031760 144731 000000 000440
00030: 017300 031760 000001 000440 000000 017070 031460 000000
00040: 000040 011000 000000 031760 000000 003400 007010 031760
00050: 000000 130472 000440 017340 031760 000000 000000 000500
00060: 017000 031460 031014 120040 000000 006000 031460 000000
00070: 000040 007000 000000 110267 000000 000000 000000 000000
00100: SAME: TO 000200-1


*T RECORD 590 (%1116, #24E)
00000: 036000 060156 105663 000636 000000 034001 012614 031760
00010: 142654 000440 000000 017300 031760 000001 000440 017070
00020: 000000 031760 130467 000440 017340 033760 000000 000000
00030: 000500 017140 033760 000000 000000 000501 017000 031760
00040: 142736 000440 000000 017340 001560 000000 000500 017070
00050: 000000 031460 000000 000040 017140 001561 000000 000000
00060: 000500 007070 031760 101376 000000 000440 017340 021760
00070: 000000 000500 000000 017000 000000 000000 000000 000000
```

167

```
00100: SAME: TO 000200-1

*T RECORD 591 (%1117, #24F)
00000: 036000 060156 133762 000714 000000 031460 000000 020040
00010: 007000 033760 000000 000003 000440 017000 121560 000000
00020: 000000 000500 017000 066271 034001 012632 000000 031460
00030: 012636 120040 005000 031760 000000 012646 000440 017030
00040: 031460 017774 000000 000040 006000 031460 000000 000040
00050: 000000 007000 031760 000000 000500 017000 000000 031460
00060: 012663 140040 005000 031460 000000 012700 020040 005000
00070: 031760 012646 000000 000440 000000 000000 000000 000000
00100: SAME: TO 000200-1

*T RECORD 592 (%1120, #250)
00000: 036000 060156 075207 000772 000000 017030 031460 017774
00010: 000040 006000 000000 031760 130464 000440 017300 031760
00020: 000000 000001 000440 017070 031460 000000 000000 000040
00030: 007000 001560 000045 000440 000000 017340 033760 000000
00040: 000502 017000 000000 143663 034001 012650 033461 012655
00050: 000000 054457 005000 123477 000000 000457 000000 017000
00060: 035477 000001 000657 017002 000000 033577 000001 000457
00070: 017000 031460 000000 012660 000000 000000 000000 000000
00100: SAME: TO 000200-1

*T RECORD 593 (%1121, #251)
00000: 036000 060156 007722 001050 000000 000040 016000 035477
00010: 000001 000657 000000 017002 033577 000001 000457 017000
00020: 000000 123477 000000 000457 017000 003177 000000 032065
00030: 000442 006000 031460 035602 000000 000040 006000 031460
00040: 000000 000040 000000 007000 031760 142735 000440 017340
00050: 000000 031460 012671 054040 005000 123461 000000 000000
00060: 000441 017000 124761 034001 000000 012666 035461 000001
00070: 000641 017002 000000 033561 000000 000000 000000 000000
00100: SAME: TO 000200-1

*T RECORD 594 (%1122, #252)
00000: 036000 060156 165136 001126 000000 000001 000441 017000
00010: 031460 012674 000000 000040 016000 035461 000001 000641
00020: 000000 017002 033561 000001 000441 017000 000000 123461
00030: 000000 000441 017000 001561 000000 000000 000500 017070
00040: 031760 142654 000000 000440 017300 031760 000001 000440
00050: 000000 017070 031460 000000 000040 007000 000000 031460
00060: 012702 054040 005000 123461 000000 000000 000441 017000
00070: 041561 000277 000000 002440 000000 000000 000000 000000
00100: SAME: TO 000200-1

*T RECORD 595 (%1123, #253)
00000: 036000 060156 022011 001204 000000 017035 012706 000000
00010: 020042 003000 000000 104633 034001 012704 033760 177777
00020: 000000 000440 017000 111760 012707 000500 000000 016030
00030: 033760 000000 000440 017000 000000 033760 014275 000501
00040: 006000 031760 000000 130474 000440 017300 031460 000000
00050: 000000 000440 017070 031461 000000 000440 000000 017170
00060: 031760 012756 000440 017030 000000 031460 017765 000040
00070: 006000 031760 000000 012756 000000 000000 000000 000000
00100: SAME: TO 000200-1

*T RECORD 596 (%1124, #254)
```

```
00000: 036000 060156 161064 001262 000000 000440 017030 031460
00010: 017774 000040 000000 006000 031760 144731 000440 017300
00020: 000000 031760 000001 000440 017070 031460 000000 000000
00030: 000040 007000 153074 034001 000000 012722 031760 144732
00040: 000440 017340 000000 031760 000000 000500 017000 041260
00050: 000000 012741 120440 005070 031760 130464 000000 000440
00060: 017340 031760 000000 000500 000000 017000 041260 034420
00070: 120440 006070 000000 031760 000000 000000 000000 000000
00100: SAME: TO 000200-1


*T RECORD 597 (%1125, #255)
00000: 036000 060156 012331 001340 000000 144731 000440 017340
00010: 031760 000000 000000 000500 017000 041260 016342 120440
00020: 000000 006070 031760 130465 000440 017340 000000 031760
00030: 000000 000500 017000 031760 000000 130466 121440 017340
00040: 031760 000000 000000 000500 017000 034420 034420 120041
00050: 000000 002000 171360 034001 012740 031460 000000 000000
00060: 000040 007000 031460 017622 000000 000040 006000 031760
00070: 144731 000440 000000 017300 000000 000000 000000 000000
00100: SAME: TO 000200-1


*T RECORD 598 (%1126, #256)
00000: 036000 060156 121670 001416 000000 041260 000000 000440
00010: 007070 031760 000000 145650 000440 017340 031760 000000
00020: 000000 000500 017000 033001 000000 020040 000000 003000
00030: 031760 101363 000440 017340 000000 103760 000000 000500
00040: 017000 031760 000000 177777 000040 017030 031460 000000
00050: 000000 020040 007000 033560 100000 000440 000000 017060
00060: 013460 005545 000440 006000 000000 031460 000000 000040
00070: 007000 066773 000000 034001 000000 000000 000000 000000
00100: SAME: TO 000200-1


*T RECORD 599 (%1127, #257)
00000: 036000 060156 054717 001474 000000 012756 001560 000030
00010: 000440 017340 000000 033460 000000 000457 017000 033760
00020: 000000 000000 000500 017140 111560 000001 000000 000440
00030: 017000 033760 012773 040501 000000 005000 031460 014275
00040: 000040 006000 000000 031760 130474 000440 017340 033760
00050: 000000 000000 000502 017140 033760 015112 000000 000503
00060: 006000 031460 014300 000040 000000 006000 001577 000034
00070: 000440 017300 000000 031460 000000 000000 000000 000000
00100: SAME: TO 000200-1


*T RECORD 600 (%1130, #258)
00000: 036000 060156 000305 001552 000000 000000 000440 017070
00010: 031461 000000 000000 000440 007170 031760 130474 000440
00020: 000000 017340 056562 034001 012774 033760 000000 000000
00030: 000500 017140 033760 012767 000000 000501 016000 001700
00040: 130467 000440 000000 017340 001560 000011 000440 017360
00050: 000000 031460 000000 000040 007000 031760 000000 130473
00060: 000440 017340 031760 000000 000000 000500 017000 031460
00070: 032776 140040 000000 006000 000000 000000 000000 000000
00100: SAME: TO 000200-1


*T RECORD 601 (%1131, #259)
00000: 036000 060156 014000 001630 000000 031460 000000 000040
00010: 007000 031760 000000 130476 000440 017340 031760 000000
00020: 000000 000500 017000 031460 000000 020040 000000 007000
```

```
00030: 031460 033040 000040 006000 000000 031460 000000 000040
00040: 007000 050753 000000 034001 013012 031760 130500 000440
00050: 000000 017340 031760 000000 000500 017000 000000 031460
00060: 000000 020040 007000 031460 000000 032766 000040 006000
00070: 031460 000000 000000 000040 000000 000000 000000 000000
00100: SAME: TO 000200-1

*T RECORD 602 (%1132, #25A)
00000: 036000 060156 017473 001706 000000 007000 031760 130501
00010: 000440 017340 000000 031760 000000 000500 017000 031460
00020: 000000 013024 020040 005000 031460 034206 000000 000040
00030: 006000 031460 000000 000040 000000 007000 031760 130502
00040: 000440 017340 000000 031760 000000 000500 017000 031460
00050: 000000 000000 020040 007000 031460 034206 000000 000040
00060: 006000 036303 002001 013030 000000 031460 000000 000040
00070: 007000 053550 000000 003400 000000 000000 000000 000000
00100: SAME: TO 000200-1

*T RECORD 603 (%1133, #25B)
00000: 014400 060121 027051 001764 000000 130464 000000 000000
00010: 000000 000000 000000 000000 000000 000000 130464 002400
00020: 000000 130476 000000 000000 000000 000000 000000 000000
00030: 130476 000000 000000 000000 000000 000000 000000 000000
00040: SAME: TO 000200-1

*T RECORD 604 (%1134, #25C)
00000: 002000 120000 120000 000000 000000 000000 000000 000000
00010: SAME: TO 000200-1

*T RECORD 605 (%1135, #25D)
00000: 025000 020000 153442 077113 054502 030440 000420 000000
00010: SAME: TO 000020-1
00020: 000000 020040 052101 041114 042440 047506 020113 042531
00030: 041117 040522 042040 041125 052124 047516 051440 036070
00040: 032460 031462 033056 030071 031065 037040 020040 020040
00050: 020040 020040 000000 000000 000000 000000 000000 000000
00060: SAME: TO 000200-1

*T RECORD 606 (%1136, #25E)
00000: 003400 040001 044216 077113 054502 030400 000000 000000
00010: SAME: TO 000200-1

*T RECORD 607 (%1137, #25F)
00000: 036000 060156 013722 000000 000000 000417 034000 130503
00010: 103532 054123 000000 053501 050462 030503 053106 051104
00020: 000000 042464 031502 047110 054507 052066 000000 032515
00030: 026113 044512 052470 033456 000000 027473 050114 047460
00040: 034440 020135 000000 055472 040136 026410 015411 006412
00050: 000000 057610 056060 026062 032461 032067 000000 034056
00060: 020354 154463 033071 020326 000000 141310 140703 152712
00070: 130724 142440 000000 175304 000000 000000 000000 000000
00100: SAME: TO 000200-1

*T RECORD 608 (%1140, #260)
00000: 036000 060156 030620 000056 000000 151662 020205 103347
00010: 100604 101602 000000 020040 020320 150440 146714 020040
00020: 000000 020040 020040 020040 057325 034000 000000 130573
00030: 020040 020040 020040 020040 000000 020040 020040 020040
```

170

```
00040: 020040 103572 000000 074163 073541 070442 020543 073146
00050: 000000 071144 062444 021542 067150 074547 000000 072046
00060: 022555 036153 064552 072450 000000 023476 037453 070154
00070: 067460 024440 000000 020175 000000 000000 000000 000000
00100: SAME: TO 000200-1

*T RECORD 609 (%1141, #261)
00000: 036000 060156 072326 000134 000000 075452 060176 036410
00010: 015411 006412 000000 077610 076060 026062 032461 032067
00020: 000000 034056 020354 154463 033071 020326 000000 141310
00030: 140703 152712 130724 142440 000000 175304 151662 020205
00040: 103347 100604 000000 101602 000501 034000 130663 020040
00050: 000000 020320 150440 146714 020040 020040 000000 020040
00060: 020040 020040 020040 020040 000000 020040 020040 020040
00070: 020040 020040 000000 020032 000000 000000 000000 000000
00100: SAME: TO 000200-1

*T RECORD 610 (%1142, #262)
00000: 036000 060156 010373 000212 000000 014023 013401 010462
00010: 030403 013006 000000 011004 002464 031402 007010 014407
00020: 000000 012066 032415 026013 004412 012470 000000 033456
00030: 027473 010014 007460 034440 000000 020035 015472 000036
00040: 026751 015751 000000 006412 017440 016060 026062 032461
00050: 000000 032067 034056 020354 154463 033071 000000 020326
00060: 141306 140665 165313 154763 000000 034000 130753 130724
00070: 142440 175264 000000 151663 000000 000000 000000 000000
00100: SAME: TO 000200-1

*T RECORD 611 (%1143, #263)
00000: 036000 060156 067360 000270 000000 020330 175747 162327
00010: 156733 020040 000000 020317 147040 146714 020040 020040
00020: 000000 020040 020040 020040 020040 020040 000000 020040
00030: 020040 020040 020040 020040 000000 020032 014023 013401
00040: 010442 020403 000000 013006 011004 002444 021402 007010
00050: 000000 014407 012046 022415 036013 004412 000000 012450
00060: 023476 037453 010014 007460 000000 024440 020035 015452
00070: 000036 036751 000000 015751 000000 000000 000000 000000
00100: SAME: TO 000200-1

*T RECORD 612 (%1144, #264)
00000: 033400 060152 117040 000346 000000 006412 017440 016060
00010: 026062 032461 000000 032067 161404 020000 131043 034056
00020: 000000 020354 154463 033071 020326 141306 000000 140665
00030: 165313 130724 142440 175264 000000 151663 020330 175747
00040: 162327 156733 000000 020040 020317 147040 146714 020040
00050: 000000 020040 020040 020040 020040 020040 000000 020040
00060: 020040 020040 020040 020040 000000 020040 026754 000000
00070: SAME: TO 000200-1

*T RECORD 613 (%1145, #265)
00000: 002000 120000 120000 000000 000000 000000 000000 000000
00010: SAME: TO 000200-1

*T RECORD 614 (%1146, #266)
00000: 025000 020000 166431 077113 054502 031440 000421 000000
00010: SAME: TO 000020-1
00020: 000000 020124 040502 046105 020117 043040 021110 050042
00030: 020113 042531 041117 040522 042040 020040 020074 034065
```

171

```
00040: 030070 031067 027061 030063 031476 020040 020040 020040
00050: 020040 020040 000000 000000 000000 000000 000000 000000
00060: SAME: TO 000200-1


*T RECORD 615 (%1147, #267)
00000: 003400 040001 045216 077113 054502 031400 000000 000000
00010: SAME: TO 000200-1


*T RECORD 616 (%1150, #268)
00000: 036000 060156 075641 000000 000000 000420 034000 131103
00010: 020040 020040 000000 020040 020040 020312 145610 103606
00020: 000000 102440 034315 146010 036455 030071 000000 044720
00030: 150534 056533 050117 045326 000000 164015 023473 046113
00040: 046725 140440 000000 030457 027054 020303 141304 020040
00050: 000000 020040 102107 020040 060201 101203 000000 033440
00060: 020040 031464 032466 052411 000000 050527 042522 052131
00070: 044062 020101 000000 051504 000000 000000 000000 000000
00100: SAME: TO 000200-1


*T RECORD 617 (%1151, #269)
00000: 036000 060156 057451 000056 000000 043237 026040 033071
00010: 032470 032067 000000 004455 031453 031057 030452 020040
00020: 000000 027372 020354 030331 032432 034000 000000 131173
00030: 047033 020132 054103 053102 000000 020040 020040 020040
00040: 020040 020040 000000 020040 020040 020040 020312 145610
00050: 000000 103606 102440 025315 146010 025537 000000 024450
00060: 064720 150574 076573 070157 000000 065326 143015 021072
00070: 066153 066725 000000 151440 000000 000000 000000 000000
00100: SAME: TO 000200-1


*T RECORD 618 (%1152, #26A)
00000: 036000 060156 035677 000134 000000 020477 037074 020303
00010: 152304 020040 000000 020040 102147 020040 077201 101203
00020: 000000 023040 020040 021444 022536 072751 000000 070567
00030: 062562 072171 064100 020141 000000 071544 063305 026040
00040: 033071 032470 000000 032067 173750 034000 131263 164455
00050: 000000 031453 031057 030452 020040 027372 000000 020354
00060: 030331 067177 020172 074143 000000 073142 020040 020040
00070: 020040 020040 000000 020040 000000 000000 000000 000000
00100: SAME: TO 000200-1


*T RECORD 619 (%1153, #26B)
00000: 036000 060156 173355 000212 000000 020040 020040 020040
00010: 165312 145610 000000 103606 102440 034315 146010 036455
00020: 000000 030071 004720 150434 016433 010017 000000 005326
00030: 164015 023473 006013 006725 000000 140440 030457 027054
00040: 020303 141304 000000 020040 020040 102007 020040 000201
00050: 000000 101203 033440 020040 031464 032466 000000 012411
00060: 010427 002422 012031 026652 000000 034000 131353 004062
00070: 020001 011404 000000 003040 000000 000000 000000 000000
00100: SAME: TO 000200-1


*T RECORD 620 (%1154, #26C)
00000: 036000 060156 057326 000270 000000 026040 033071 032470
00010: 032067 004455 000000 031453 031057 030452 020040 027372
00020: 000000 020354 030331 007033 020032 014003 000000 013002
00030: 020040 020040 020040 020040 000000 020040 020040 020040
00040: 020040 165312 000000 145610 103606 102440 025315 146210
```

```
00050: 000000 025537 024450 004720 150434 016433 000000 020040
00060: 005326 143015 021072 006013 000000 006440 140440 020477
00070: 037074 020040 000000 020040 000000 000000 000000 000000
00100: SAME: TO 000200-1


*T RECORD 621 (%1155, #26D)
00000: 034000 060153 152605 000346 000000 020040 020040 020007
00010: 020040 017601 000000 101203 012135 020400 131443 023040
00020: 000000 020040 021444 022536 012751 010427 000000 002422
00030: 012031 004062 020001 011404 000000 003305 026040 033071
00040: 032470 032067 000000 164455 031453 031057 030452 020325
00050: 000000 027372 020354 030331 007177 020032 000000 014003
00060: 013002 020040 020040 020040 000000 020040 177777 107066
00070: 000000 000000 000000 000000 000000 000000 000000 000000
00100: SAME: TO 000200-1


*T RECORD 622 (%1156, #26E)
00000: 002000 120000 120000 000000 000000 000000 000000 000000
00010: SAME: TO 000200-1


*T RECORD 623 (%1157, #26F)
00000: 025000 020000 171741 077124 042530 052040 005060 000000
00010: SAME: TO 000020-1
00020: 000000 020040 020120 051111 047124 020103 051124 020124
00030: 042530 052040 036070 032460 033460 034056 030466 031471
00040: 037040 020040 020040 020040 020040 020040 020040 020040
00050: 020040 020040 000000 000000 000000 000000 000000 000000
00060: SAME: TO 000200-1


*T RECORD 624 (%1160, #270)
00000: 003400 040001 053655 077124 042530 052000 000000 000000
00010: SAME: TO 000200-1


*T RECORD 625 (%1161, #271)
00000: 036000 060156 026651 000000 000000 005057 034001 013031
00010: 031460 025732 000000 000040 006000 111561 000050 000440
00020: 000000 017000 031460 013037 120040 005000 000000 001560
00030: 000004 000440 017340 033760 000000 010000 000442 017000
00040: 031562 000000 000000 000500 017070 031460 002466 000440
00050: 000000 006300 033760 000000 000501 017140 000000 033760
00060: 000000 000502 017140 033760 000000 000000 000503 017140
00070: 033760 000000 000000 000504 000000 000000 000000 000000
00100: SAME: TO 000200-1


*T RECORD 626 (%1162, #272)
00000: 036000 060156 107055 000056 000000 017140 033760 000000
00010: 000505 017140 000000 031760 131504 016440 017360 003565
00020: 000000 000000 000445 017170 045526 034001 000000 013047
00030: 001165 000000 000445 017000 000000 040564 000377 015440
00040: 017170 031760 000000 000000 003500 017035 120660 013055
00050: 000000 150500 005000 031760 000000 000500 000000 017035
00060: 100760 000000 000500 017000 000000 031463 000000 000440
00070: 017170 001161 000000 000000 000000 000000 000000 000000
00100: SAME: TO 000200-1


*T RECORD 627 (%1163, #273)
00000: 036000 060156 017506 000134 000000 000441 017170 031462
00010: 000000 000440 000000 017170 001660 000000 000500 017170
```

```
00020: 000000 041564 007400 001440 017037 031460 000000 013065
00030: 020040 005000 021740 000000 000000 154500 017030 101760
00040: 000000 000500 000000 017030 022562 010001 013065 021760
00050: 000000 013067 050500 005170 031760 000014 000000 000440
00060: 017170 031760 000007 000440 000000 017170 031760 000004
00070: 000440 017170 000000 123303 000000 000000 000000 000000
00100: SAME: TO 000200-1

*T RECORD 628 (%1164, #274)
00000: 036000 060156 123001 000212 000000 034001 013071 031760
00010: 004000 000440 000000 017030 031760 131520 000440 017360
00020: 000000 031760 000005 000440 017270 031460 000000 013635
00030: 014040 005000 031760 131510 000000 000440 017340 030760
00040: 000000 000500 000000 017000 031760 131520 000440 017340
00050: 000000 041660 000000 000500 017000 031760 000000 131517
00060: 000040 017340 037760 013107 000000 120517 006000 031760
00070: 131520 000440 000000 017340 000000 000000 000000 000000
00100: SAME: TO 000200-1

*T RECORD 629 (%1165, #275)
00000: 036000 060156 110760 000270 000000 031760 000000 000500
00010: 017075 031760 000000 131517 000440 017340 021760 013074
00020: 000000 000500 016070 137530 030001 013107 000000 001577
00030: 131524 000440 017340 033760 000000 000000 000517 017140
00040: 031760 131521 000000 000440 017360 031477 000000 000440
00050: 000000 017170 031760 010000 000440 017170 000000 021760
00060: 000000 000500 017000 030760 000000 000000 020500 007000
00070: 031760 131510 000000 000440 000000 000000 000000 000000
00100: SAME: TO 000200-1

*T RECORD 630 (%1166, #276)
00000: 036000 060156 134013 000346 000000 017340 041660 000000
00010: 000500 017000 000000 031460 013123 020040 006000 031760
00020: 000000 131523 000440 017340 031760 013114 000000 003500
00030: 016077 175622 006000 131524 000000 004120 011040 004100
00040: 010040 004161 000000 016041 004162 016042 004164 016044
00050: 000000 004170 016050 074202 026001 013123 000000 061660
00060: 170000 000440 017030 031760 000000 131540 000440 017360
00070: 031760 000004 000000 000440 000000 000000 000000 000000
00100: SAME: TO 000200-1

*T RECORD 631 (%1167, #277)
00000: 036000 060156 135376 000424 000000 017170 030760 000100
00010: 000440 017000 000000 121660 000000 000500 017000 030760
00020: 000000 000000 020500 007000 031760 131510 000000 000440
00030: 017340 041660 000000 000500 000000 017000 031460 013136
00040: 020040 006000 000000 031760 131541 000440 017340 031760
00050: 000000 013126 003500 016077 127203 034001 000000 013136
00060: 061660 000074 001440 017036 000000 031760 131542 000440
00070: 017360 031760 000000 131512 000000 000000 000000 000000
00100: SAME: TO 000200-1

*T RECORD 632 (%1170, #278)
00000: 036000 060156 070030 000502 000000 000440 017340 033760
00010: 000000 000502 000000 017240 033760 000000 000501 017000
00020: 000000 030461 000000 000440 017000 033760 000000 131543
00030: 000440 017000 041561 000017 000000 001440 017034 111760
00040: 013527 123500 000000 006010 033760 131557 000440 017000
```

174

```
00050: 000000 030462 000000 000440 017000 041562 000000 000017
00060: 000440 017000 041260 013527 000000 123440 006010 031460
00070: 013545 000040 000000 006000 000000 000000 000000 000000
00100: SAME: TO 000200-1


*T RECORD 633 (%1171, #279)
00000: 036000 060156 131024 000560 000000 114214 034001 013154
00010: 043260 013273 000000 000446 006000 031760 131505 000440
00020: 000000 017340 030760 000340 000440 017000 000000 033760
00030: 000017 000457 017000 041577 000000 000000 000500 017030
00040: 001660 013356 000000 000500 006030 041563 040000 003440
00050: 000000 017036 113760 013301 000512 006000 000000 101464
00060: 000000 000440 017000 031460 000000 013215 020040 005000
00070: 043561 000017 000000 000457 000000 000000 000000 000000
00100: SAME: TO 000200-1


*T RECORD 634 (%1172, #27A)
00000: 036000 060156 177416 000636 000000 017000 031460 013200
00010: 120040 005000 000000 041260 013261 003440 006010 060161
00020: 000000 000000 000442 017000 076625 034001 000000 013172
00030: 040660 177760 000440 017000 000000 031460 013200 120040
00040: 005000 030760 000000 000013 000440 017000 001660 131557
00050: 000000 000040 017340 001660 131543 000040 000000 017360
00060: 010260 013175 120440 005000 000000 031760 131515 000440
00070: 017340 123577 000000 000020 000000 000000 000000 000000
00100: SAME: TO 000200-1


*T RECORD 635 (%1173, #27B)
00000: 036000 060156 103547 000714 000000 000453 017000 120572
00010: 000000 000500 000000 017000 121073 000000 000440 017000
00020: 000000 031460 013206 040040 005000 033260 000000 000000
00030: 000453 017000 003173 013221 000000 000441 006000 003173
00040: 000000 000452 000000 017000 142103 022001 013210 031760
00050: 000000 131515 000440 017340 111572 000000 000000 000500
00060: 017000 031460 013214 120040 000000 005000 043260 013301
00070: 000452 006000 000000 031460 000000 000000 000000 000000
00100: SAME: TO 000200-1


*T RECORD 636 (%1174, #27C)
00000: 036000 060156 037701 000772 000000 013164 000040 016000
00010: 031462 000000 000000 001440 017034 031760 013261 003500
00020: 000000 006010 025177 013631 000457 006002 000000 031460
00030: 000000 000040 007000 153652 000000 034001 013221 031760
00040: 131623 000440 000000 017340 031760 131515 000440 017300
00050: 000000 030760 000000 000500 017040 123572 000000 000000
00060: 000510 017000 033760 000014 000000 000454 017000 121170
00070: 000000 001453 000000 017034 000000 000000 000000 000000
00100: SAME: TO 000200-1


*T RECORD 637 (%1175, #27D)
00000: 036000 060156 107106 001050 000000 033760 000000 000510
00010: 017000 121573 000000 000020 001440 017034 033760 000000
00020: 000000 000515 017000 031475 000000 003440 000000 017010
00030: 031760 000377 000440 017034 000000 033760 177400 000451
00040: 017000 033571 000000 000000 000511 017000 121574 131623
00050: 000000 000040 017340 115340 034001 013237 000000 013474
00060: 000000 000454 017000 121574 000000 131606 000040 017300
00070: 031760 000000 000000 017500 000000 000000 000000 000000
```

```
00100: SAME: TO 000200-1

*T RECORD 638 (%1176, #27E)
00000: 036000 060156 005651 001126 000000 007010 031460 000000
00010: 000040 017040 000000 021760 000000 000500 017300 061567
00020: 000000 013252 014500 005030 001564 000000 000000 000520
00030: 017340 031760 000000 000500 000000 017034 041660 000000
00040: 000500 017030 000000 031470 000000 003440 017010 061567
00050: 000000 000000 000500 017034 033571 000000 000000 000517
00060: 017000 121574 131556 000440 000000 017340 063171 000000
00070: 000457 017000 000000 057577 000000 000000 000000 000000
00100: SAME: TO 000200-1

*T RECORD 639 (%1177, #27F)
00000: 036000 060156 130621 001204 000000 010001 013255 031475
00010: 000000 003440 000000 017010 031760 000000 000500 017034
00020: 000000 041571 000000 000500 017030 061577 000000 013236
00030: 000500 016070 136304 000400 000000 131623 000076 131721
00040: 034001 013261 000000 031760 131511 000440 017340 031760
00050: 000000 040000 000440 017700 031760 131514 000000 000440
00060: 017300 121561 000000 000500 000000 017040 043260 000000
00070: 020454 007000 000000 030760 000000 000000 000000 000000
00100: SAME: TO 000200-1

*T RECORD 640 (%1200, #280)
00000: 036000 060156 016760 001262 000000 000000 000500 017000
00010: 001574 131543 000000 000440 017340 121074 000000 000440
00020: 000000 017000 103474 000000 020454 007000 000000 031760
00030: 013267 014500 016474 031760 000000 131504 000440 017340
00040: 033760 000000 000000 000500 017140 033760 000000 000503
00050: 000000 017140 033760 000000 000505 017000 000000 020405
00060: 034001 013277 031760 131513 000000 000440 017340 033760
00070: 000000 000516 000000 007000 000000 000000 000000 000000
00100: SAME: TO 000200-1

*T RECORD 641 (%1201, #281)
00000: 036000 060156 116074 001340 000000 023760 000000 000444
00010: 017000 031465 000000 000000 000440 017000 031466 013334
00020: 000000 020440 005000 040260 013307 020440 000000 005000
00030: 033760 000040 000444 017000 000000 013466 013333 000446
00040: 016000 031476 000000 013327 120440 005000 031460 013316
00050: 000000 120040 005000 031460 000000 000440 000000 017340
00060: 033760 000016 000056 017000 000000 005163 000000 000043
00070: 017000 031476 000000 013316 000000 000000 000000 000000
00100: SAME: TO 000200-1

*T RECORD 642 (%1202, #282)
00000: 036000 060156 073457 001416 000000 020440 005000 144506
00010: 034001 013315 000000 033760 000000 000500 017000 013323
00020: 000000 013507 120040 002000 031460 013520 000000 000040
00030: 006000 033760 013326 120517 000000 005000 111577 000377
00040: 000440 017000 000000 031460 013325 120040 005000 043260
00050: 000000 000000 000440 017000 031760 000340 000000 000440
00060: 017030 031460 013356 000040 000000 006000 031260 013307
00070: 000440 016000 000000 033760 000000 000000 000000 000000
00100: SAME: TO 000200-1

*T RECORD 643 (%1203, #283)
```

```
00000: 036000 060156 107006 001474 000000 000000 000504 017000
00010: 111564 000200 000000 000440 017000 013260 013333 040446
00020: 000000 005000 033760 000040 000444 017000 000000 104611
00030: 034001 013333 013465 000000 000000 000445 017000 037464
00040: 000000 000457 000000 017000 001163 000000 014443 007000
00050: 000000 031760 131624 000040 017340 031460 000000 013342
00060: 114040 005000 113564 000040 000000 000444 017000 013355
00070: 013354 014040 000000 001000 000000 000000 000000 000000
00100: SAME: TO 000200-1


*T RECORD 644 (%1204, #284)
00000: 036000 060156 167075 001552 000000 041563 030000 000440
00010: 017000 003177 000000 013355 020444 005000 111564 000440
00020: 000000 000440 017000 031760 013347 014500 000000 005000
00030: 113564 000140 000044 017000 000000 031460 013352 120040
00040: 005000 031760 000000 132442 000440 017030 072777 012001
00050: 000000 013351 043260 013355 000444 016000 000000 113564
00060: 000140 000444 017000 003164 000000 013355 114444 005000
00070: 043260 000000 000000 000444 000000 000000 000000 000000
00100: SAME: TO 000200-1


*T RECORD 645 (%1205, #285)
00000: 036000 060156 003776 001630 000000 017000 003564 000000
00010: 000504 007000 000000 102663 000400 131624 131642 063466
00020: 000000 034001 013356 033760 000000 000517 000000 017000
00030: 113577 000340 000457 017000 000000 031460 013504 014040
00040: 005000 111577 000000 000020 000440 017000 040260 013365
00050: 000000 114440 005000 043563 177760 000443 000000 017000
00060: 003177 013373 000443 016000 000000 113577 000030 000457
00070: 017000 031460 000000 013504 000000 000000 000000 000000
00100: SAME: TO 000200-1


*T RECORD 646 (%1206, #286)
00000: 036000 060156 027750 001706 000000 014040 005000 111577
00010: 000004 000440 000000 017000 031477 013504 115440 005034
00020: 000000 043563 147777 000443 017000 003563 000000 000000
00030: 000503 017000 045563 000002 000000 000447 017000 067211
00040: 034001 013374 000000 123467 000000 000447 017000 031760
00050: 000000 131514 000440 017340 111660 000000 000000 000500
00060: 017000 001163 013474 020443 000000 005000 037260 013427
00070: 014457 005000 000000 041563 000000 000000 000000 000000
00100: SAME: TO 000200-1


*T RECORD 647 (%1207, #287)
00000: 036000 060156 040162 001764 000000 030000 000440 017000
00010: 101260 013410 000000 020440 005000 001740 000000 044440
00020: 000000 017035 001660 131607 000440 017360 000000 005660
00030: 000002 000457 017003 031477 000000 013505 000440 006030
00040: 031460 013437 000000 000040 016000 123660 177775 000457
00050: 000000 017000 003577 000003 000457 017000 000000 142671
00060: 034001 013412 031477 013411 000000 017440 005036 003577
00070: 000000 000517 000000 017000 000000 000000 000000 000000
00100: SAME: TO 000200-1


*T RECORD 648 (%1210, #288)
00000: 036000 060156 035715 002042 000000 011477 000000 001440
00010: 017034 001660 000000 131607 000440 017360 021760 000000
00020: 000000 000440 017030 003660 000002 000457 000000 017000
```

```
00030: 113577 000003 000457 017000 000000 101760 013420 114500
00040: 005030 111660 000000 000011 000440 017000 031460 013425
00050: 000000 040040 005000 041260 000000 000440 000000 017030
00060: 031460 013505 000040 006000 000000 031460 013437 000040
00070: 016000 003077 000000 000000 000000 000000 000000 000000
00100: SAME: TO 000200-1


*T RECORD 649 (%1211, #289)
00000: 036000 060156 043273 002120 000000 000457 017000 123712
00010: 034001 013430 000000 121577 000016 001440 017034 001660
00020: 000000 131607 000440 017360 121660 000005 000000 000440
00030: 017000 001740 000000 114040 000000 017030 031260 013436
00040: 014440 005000 000000 001740 000000 120440 017030 031460
00050: 000000 013505 000040 006000 111660 000011 000000 000440
00060: 017000 031460 013443 120040 000000 005000 041563 000004
00070: 000440 017000 000000 021160 000000 000000 000000 000000
00100: SAME: TO 000200-1


*T RECORD 650 (%1212, #28A)
00000: 036000 060156 121323 002176 000000 013505 120440 006030
00010: 031760 131542 000000 000440 017340 031760 000000 001500
00020: 000000 017034 043563 000003 000457 017000 000000 065303
00030: 034001 013446 061577 000003 000000 000440 017000 063563
00040: 013456 120517 000000 005000 041577 007400 000440 017000
00050: 000000 031460 013453 120040 005000 043260 000000 013473
00060: 000447 016000 041260 013505 000000 000440 006030 031760
00070: 131542 000440 000000 017340 000000 000000 000000 000000
00100: SAME: TO 000200-1


*T RECORD 651 (%1213, #28B)
00000: 036000 060156 066546 002254 000000 031760 013462 001500
00010: 016034 063563 000000 000000 000517 017000 041577 007400
00020: 000000 000440 017000 031463 013462 120440 000000 005000
00030: 031460 013472 144040 005000 000000 031760 000000 001500
00040: 017034 063563 000000 000000 000517 017000 062137 034001
00050: 000000 013464 041577 000360 000440 017000 000000 031460
00060: 013473 120040 005000 041563 000000 000010 000440 017000
00070: 023740 000000 000000 020447 000000 000000 000000 000000
00100: SAME: TO 000200-1


*T RECORD 652 (%1214, #28C)
00000: 036000 060156 050654 002332 000000 017000 041260 013505
00010: 000440 006030 000000 031460 013473 000040 016000 043260
00020: 000000 013505 000447 006030 100260 013375 000000 000440
00030: 016000 041563 040000 003440 000000 017034 031460 013477
00040: 120040 005000 000000 041563 030000 003440 017034 033760
00050: 000000 000000 000517 017000 001577 131625 000000 000440
00060: 017340 031760 131623 000440 000000 017360 111174 012001
00070: 013502 001577 000000 131632 000000 000000 000000 000000
00100: SAME: TO 000200-1


*T RECORD 653 (%1215, #28D)
00000: 036000 060156 052245 002410 000000 000440 017340 031760
00010: 131624 000440 000000 017360 120160 000000 000440 007000
00020: 000000 001660 131573 000440 017360 031460 000000 000000
00030: 000040 007000 137012 002400 000000 131625 000076 000177
00040: 000177 000177 000000 000016 132536 002400 131632 131642
00050: 000000 000000 132442 000000 133242 151400 000000 034001
```

178

```
00060: 013507 031460 000000 000440 000000 017340 030760 000377
00070: 000040 017000 000000 031463 000000 000000 000000 000000
00100: SAME: TO 000200-1


*T RECORD 654 (%1216, #28E)
00000: 036000 060156 100561 002466 000000 013517 020440 005000
00010: 013476 013514 000000 014456 005000 031760 013515 002500
00020: 000000 016034 103460 000000 000440 017000 000000 063563
00030: 100000 000443 017000 041660 000000 000000 000500 007030
00040: 101260 000000 000000 000440 007037 030760 000340 000440
00050: 000000 017000 111660 000000 000500 017000 000000 040260
00060: 000000 040440 007000 030760 000000 000200 000440 017000
00070: 120660 000000 000000 000500 000000 000000 000000 000000
00100: SAME: TO 000200-1


*T RECORD 655 (%1217, #28F)
00000: 036000 060156 177124 002544 000000 017000 024206 034001
00010: 013525 043260 000000 000000 114057 007000 100177 000000
00020: 000000 000457 007000 031760 131520 000440 000000 017340
00030: 033760 100000 000457 017000 000000 003577 013621 000517
00040: 006000 031760 000000 131521 005440 017340 103760 000000
00050: 000000 000457 017000 031460 013557 000040 000000 006000
00060: 031760 131514 000440 017340 000000 011460 000000 000440
00070: 017300 030760 000000 000000 000000 000000 000000 000000
00100: SAME: TO 000200-1


*T RECORD 656 (%1220, #290)
00000: 036000 060156 145101 002622 000000 000500 017000 031760
00010: 040000 000440 000000 017700 010260 000000 014440 017440
00020: 000000 031760 013541 120500 005174 007010 000000 034001
00030: 013543 025177 013631 000457 000000 006002 031460 000000
00040: 000040 007000 000000 031760 131520 000440 017340 033760
00050: 000000 100000 000457 017000 003577 013621 000000 000517
00060: 006000 031760 131522 001440 000000 017340 003562 000017
00070: 000457 017000 000000 043577 000000 000000 000000 000000
00100: SAME: TO 000200-1


*T RECORD 657 (%1221, #291)
00000: 036000 060156 130740 002700 000000 077760 000457 017000
00010: 040561 077760 000000 000440 017000 121077 000000 001440
00020: 000000 017304 033760 013557 000537 006000 000000 031460
00030: 000000 000040 007000 031760 000000 131637 000440 017360
00040: 031477 000000 000000 000440 017170 063162 034001 013561
00050: 000000 041660 177760 000440 017170 031760 000000 131520
00060: 000440 017340 033760 000000 000000 000517 017000 031760
00070: 041400 000440 000000 017700 000000 000000 000000 000000
00100: SAME: TO 000200-1


*T RECORD 658 (%1222, #292)
00000: 036000 060156 173576 002756 000000 031760 100001 014440
00010: 017470 031760 000000 131637 000440 017340 031760 043001
00020: 000000 000440 017700 031760 000000 014500 000000 017460
00030: 031760 043400 000440 017700 000000 031760 000042 014440
00040: 017470 001700 000000 100000 001440 017036 030760 000000
00050: 000000 000500 017000 001577 000022 000440 000000 017700
00060: 001660 000001 014440 017470 000000 145343 034001 013577
00070: 001660 000004 000000 014440 000000 000000 000000 000000
00100: SAME: TO 000200-1
```

179

```
*T RECORD 659 (%1223, #293)
00000: 036000 060156 105213 003034 000000 017570 031760 131540
00010: 000440 017340 000000 031760 131507 000440 017300 030760
00020: 000000 000000 000500 017040 001577 000004 000000 000440
00030: 017700 001660 000000 014500 000000 017470 031760 131514
00040: 000440 017340 000000 031760 000000 014500 017560 031760
00050: 000000 131542 000440 017340 031760 131641 000000 000440
00060: 017300 030760 000000 000500 000000 017040 001660 000000
00070: 014500 017570 000000 031760 000000 000000 000000 000000
00100: SAME: TO 000200-1

*T RECORD 660 (%1224, #294)
00000: 036000 060156 076311 003112 000000 131640 000440 017340
00010: 031760 000000 000000 014500 017560 114224 010001 013615
00020: 000000 001577 000032 000440 017760 031760 000000 041400
00030: 000440 017700 041260 000000 000000 014440 017470 031460
00040: 000000 000040 000000 007000 110136 034001 013621 031460
00050: 000000 000000 000040 037170 031460 000000 000000 000040
00060: 017000 031460 000000 000040 000000 037150 031760 000076
00070: 000440 017340 000000 031760 000000 000000 000000 000000
00100: SAME: TO 000200-1

*T RECORD 661 (%1225, #295)
00000: 036000 060156 050430 003170 000000 000000 000500 017000
00010: 031460 013621 000000 120040 005000 031477 000000 000440
00020: 000000 017070 031460 000000 000040 027170 000000 031460
00030: 000000 000040 037150 031760 000000 000076 000440 017340
00040: 041577 000000 000000 000500 017070 031460 000000 000040
00050: 000000 027170 031460 025763 000040 006000 000000 031460
00060: 000000 000040 007000 152067 000000 034000 131642 045526
00070: 044011 022446 000000 071034 000000 000000 000000 000000
00100: SAME: TO 000200-1

*T RECORD 662 (%1226, #296)
00000: 036000 060156 160526 003246 000000 011605 012345 071034
00010: 011611 014311 000000 071030 041611 014311 071030 041607
00020: 000000 004102 071030 041745 012342 031136 000000 044452
00030: 030511 010512 024521 043744 000000 061230 051744 016047
00040: 045136 045107 000000 004102 041020 070344 014204 045114
00050: 000000 030007 004102 071030 041344 014204 000000 035020
00060: 034006 012305 071034 011606 000000 022446 071034 011602
00070: 004102 071122 000000 070004 000000 000000 000000 000000
00100: SAME: TO 000200-1

*T RECORD 663 (%1227, #297)
00000: 036000 060156 010314 003324 000000 010207 071122 070106
00010: 004107 071122 000000 070341 033436 034000 131732 004207
00020: 000000 071122 070301 004046 071122 070043 000000 012741
00030: 045526 044452 030511 071034 000000 011605 012102 071030
00040: 041705 014246 000000 035020 034011 032551 071030 041621
00050: 000000 067261 071034 011705 014246 071030 000000 041607
00060: 020407 071030 041344 016047 000000 035026 045744 016047
00070: 071134 045344 000000 016047 000000 000000 000000 000000
00100: SAME: TO 000200-1

*T RECORD 664 (%1230, #298)
00000: 036000 060156 004514 003402 000000 045122 030344 016047
```

```
00010: 000000 000000 000000 000000 010204 010200 010000 024512
00020: 000000 000000 000000 024537 025752 024000 000000 010764
00030: 034276 010000 061442 104233 000000 034000 132022 010423
00040: 006000 021224 000000 021262 032000 010204 000000 000000
00050: 000000 010420 041010 010000 010101 002042 000000 010000
00060: 011256 010725 010000 000204 000000 076204 000000 000000
00070: 000204 020000 000000 000000 000000 000000 000000 000000
00100: SAME: TO 000200-1

*T RECORD 665 (%1231, #299)
00000: 036000 060156 166060 003460 000000 076000 000000 000000
00010: 000000 010000 000000 000042 010420 000000 035063 053461
00020: 000000 034000 010604 010204 034000 035041 000000 035020
00030: 076000 076042 014061 034000 000000 004312 045742 004000
00040: 077036 002061 000000 034000 016420 075061 034000 076041
00050: 000000 004210 040000 156200 034000 132112 000000 035061
00060: 035061 034000 035061 036042 000000 070000 000004 000200
00070: 000000 000004 000000 000204 000000 000000 000000 000000
00100: SAME: TO 000200-1

*T RECORD 666 (%1232, #29A)
00000: 036000 060156 066615 003536 000000 020000 004210 040404
00010: 004000 000037 000000 001740 000000 020202 002104 020000
00020: 000000 035041 014200 010000 035065 057320 000000 036000
00030: 010521 043761 042000 075061 000000 075061 074000 035060
00040: 041021 034000 000000 075061 043061 074000 077020 075020
00050: 000000 076000 077020 075020 040000 035060 000000 041161
00060: 036000 043061 077061 042000 000000 034204 010204 034000
00070: 002041 002061 000000 023346 000000 000000 000000 000000
00100: SAME: TO 000200-1

*T RECORD 667 (%1233, #29B)
00000: 036000 060156 045206 003614 000000 034000 132202 034000
00010: 043124 061222 000000 042000 041020 041020 076000 043565
00020: 000000 053261 042000 043071 053161 042000 000000 035061
00030: 043061 034000 075061 075020 000000 040000 035061 043262
00040: 032000 075061 000000 075222 042000 035060 034061 034000
00050: 000000 077244 010204 010000 043061 043061 000000 034000
00060: 043061 024504 010000 043061 000000 053265 024000 043052
00070: 010521 042000 000000 043052 000000 000000 000000 000000
00100: SAME: TO 000200-1

*T RECORD 668 (%1234, #29C)
00000: 036000 060156 140213 003672 000000 010204 010000 076042
00010: 010420 076000 000000 077430 061430 076000 001010 010101
00020: 000000 000000 076143 140436 034000 132272 000000 006143
00030: 076000 010521 000000 000000 000000 000000 000000 076000
00040: 020202 000000 000000 000000 000016 002761 036000 041036
00050: 000000 043061 074000 000017 041020 036000 000000 002057
00060: 043061 036000 000016 043760 000000 034000 004204 034204
00070: 010000 000017 000000 042741 000000 000000 000000 000000
00100: SAME: TO 000200-1

*T RECORD 669 (%1235, #29D)
00000: 036000 060156 077356 003750 000000 034000 041036 043061
00010: 042000 010014 000000 010204 034000 010004 010224 020000
00020: 000000 020411 024612 022000 030204 010204 000000 034000
00030: 000032 053265 052000 000036 000000 043061 042000 000016
```

```
00040: 043061 034000 000000 100442 030000 132362 000036 043720
00050: 000000 040000 000017 042741 002000 000013 000000 030410
00060: 020000 000017 040701 074000 000000 000216 010204 004000
00070: 000021 043061 000000 036000 000000 000000 000000 000000
00100: SAME: TO 000200-1

*T RECORD 670 (%1236, #29E)
00000: 036000 060156 050553 004026 000000 000021 042512 010000
00010: 000021 043065 000000 024000 000021 024212 042000 000021
00020: 000000 042642 030000 000037 004210 076000 000000 004204
00030: 020204 004000 010204 010204 000000 010000 020204 004204
00040: 020000 002720 000000 000000 000000 025252 052525 024000
00050: 000000 130204 034000 132442 000000 000000 000000 000000
00060: 000000 000000 000000 016034 000000 016034 016034 017434
00070: 016034 016034 000000 016034 000000 000000 000000 000000
00100: SAME: TO 000200-1

*T RECORD 671 (%1237, #29F)
00000: 036000 060156 117162 004104 000000 016034 016034 076034
00010: 016034 016034 000000 000000 000000 000177 077577 004010
00020: 000000 004010 004010 004010 004177 077577 000000 000000
00030: 000000 022044 022044 022044 000000 023444 022044 022044
00040: 022044 022044 000000 022044 062044 022044 022044 000000
00050: 000000 000000 077400 000000 077410 004010 000000 004010
00060: 004010 077400 000000 077400 000000 000000 022044 022044
00070: 161246 034000 000000 132532 000000 000000 000000 000000
00100: SAME: TO 000200-1

*T RECORD 672 (%1240, #2A0)
00000: 036000 060156 040073 004162 000000 022044 022044 022044
00010: 022044 016034 000000 016034 016034 077434 016034 016034
00020: 000000 004010 004010 004177 077577 004010 000000 004010
00030: 000000 000000 000000 077400 000000 000000 000000 004010
00040: 004010 004010 000000 004010 004010 004017 004010 004010
00050: 000000 004010 004010 004010 004010 004010 000000 004010
00060: 004010 077410 004010 004010 000000 016034 016034 016177
00070: 077577 016034 000000 016034 000000 000000 000000 000000
00100: SAME: TO 000200-1

*T RECORD 673 (%1241, #2A1)
00000: 036000 060156 010065 004240 000000 016034 016034 016037
00010: 017437 016034 000000 016034 016034 016034 016174 076174
00020: 000000 004623 034000 132622 016034 016034 000000 000000
00030: 000000 000177 077577 016034 000000 016034 016034 016034
00040: 016177 077577 000000 000000 000000 004010 004010 004010
00050: 000000 007410 004010 004010 004010 004010 000000 004010
00060: 074010 004010 004010 000000 000000 000000 000000 077410
00070: 004010 004010 000000 004010 000000 000000 000000 000000
00100: SAME: TO 000200-1

*T RECORD 674 (%1242, #2A2)
00000: 036000 060156 076250 004316 000000 004010 004010 077400
00010: 000000 000000 000000 000000 000000 077400 000000 077400
00020: 000000 000000 016034 016034 016034 016034 000000 016034
00030: 016034 000000 000000 000177 000000 077577 000000 000000
00040: 117154 034000 000000 132712 022044 022044 022044 077444
00050: 000000 022044 022044 007410 004010 004010 000000 004010
00060: 004010 004010 004010 004010 000000 077410 004010 077410
```

182

```
00070: 004010 022044 000000 022044 000000 000000 000000 000000
00100: SAME: TO 000200-1


*T RECORD 675 (%1243, #2A3)
00000: 036000 060156 045516 004374 000000 077444 022044 077444
00010: 022044 004010 000000 004010 007410 004010 007410 004010
00020: 000000 016034 016034 016037 017437 000000 000000 000000
00030: 016034 016034 016174 077574 000000 016034 016034 037477
00040: 037477 037477 000000 037477 037477 037477 036074 036074
00050: 000000 036074 036074 036074 036074 030060 000000 030060
00060: 150452 034000 133002 030060 000000 030060 030060 030060
00070: 004010 004010 000000 004010 000000 000000 000000 000000
00100: SAME: TO 000200-1


*T RECORD 676 (%1244, #2A4)
00000: 036000 060156 052324 004452 000000 007400 000000 000000
00010: 004010 004010 000000 004010 074000 000000 000000 000000
00020: 000000 000000 000000 077401 000401 000000 000000 074010
00030: 004010 004010 004010 074010 000000 004010 000000 000000
00040: 000000 077410 000000 004010 000000 000000 000000 000000
00050: 000000 077441 020441 000000 000000 000000 000000 000000
00060: 077451 024451 000000 016034 000000 016034 016177 077577
00070: 004010 004010 000000 004010 000000 000000 000000 000000
00100: SAME: TO 000200-1


*T RECORD 677 (%1245, #2A5)
00000: 036000 060156 135420 004530 000000 004010 004177 077577
00010: 005034 034000 000000 133072 016034 016034 074010 004010
00020: 000000 074010 004010 074010 004010 004010 000000 004010
00030: 004010 004010 004010 004170 000000 000000 000000 000037
00040: 017437 016034 000000 016034 000000 000000 000000 007410
00050: 000000 004010 004010 016034 016034 016174 000000 076174
00060: 000000 000000 000000 000000 000000 000000 074010 004010
00070: 004010 004010 000000 004010 000000 000000 000000 000000
00100: SAME: TO 000200-1


*T RECORD 678 (%1246, #2A6)
00000: 036000 060156 057144 004606 000000 074010 004010 004010
00010: 004010 016034 000000 016034 016037 077437 016034 016034
00020: 000000 000000 000000 000174 076174 016034 000000 016034
00030: 150046 030000 133162 000000 000000 000000 000077 037477
00040: 037477 037477 000000 074010 004010 004010 004010 004010
00050: 000000 004010 000000 000000 000000 000000 000000 037477
00060: 037477 004010 004010 074010 000000 004010 074010 004010
00070: 000000 000000 000000 000000 000000 000000 000000 000000
00100: SAME: TO 000200-1


*T RECORD 679 (%1247, #2A7)
00000: 036000 060156 125655 004664 000000 061400 000000 000000
00010: 022044 022044 000000 022044 077400 000000 000000 000000
00020: 000000 000000 000000 016000 000000 000000 000000 000000
00030: 000000 000000 077444 022044 000000 022044 152444 034000
00040: 133242 000000 000000 022202 055000 057575 076737 051245
00050: 000000 066777 022000 012221 042224 005250 000000 002720
00060: 000024 000700 000002 011244 000000 075557 062227 071747
00070: 071717 045711 000000 074717 000000 000000 000000 000000
00100: SAME: TO 000200-1
```

```
*T RECORD 680 (%1250, #2A8)
00000: 036000 060156 170660 004742 000000 044757 071111 075757
00010: 075711 002020 000000 002024 012421 007070 042124 071302
00020: 000000 077747 075755 065757 074447 065556 000000 074747
00030: 074744 074457 055755 072227 000000 072226 055655 044447
00040: 057555 015754 000000 075557 075744 075571 075765 074717
00050: 000000 072222 055557 055552 055575 123423 000000 024000
00060: 133332 057275 055722 071247 000000 032223 044211 062226
00070: 025000 000007 000000 022000 000000 000000 000000 000000
00100: SAME: TO 000200-1

*T RECORD 681 (%1251, #2A9)
00000: 025400 060140 105463 005020 000000 007177 044757 007447
00010: 011757 007747 000000 032722 007717 044755 020222 020226
00020: 000000 044565 062222 005755 007555 007557 000000 007574
00030: 007571 005644 003437 022723 000000 005557 005552 005575
00040: 005225 005717 000000 007167 032623 022022 062326 017400
00050: 000000 052525 015106 000000 000000 000000 000000 000000
00060: SAME: TO 000200-1

*T RECORD 682 (%1252, #2AA)
00000: 002000 120000 120000 000000 000000 000000 000000 000000
00010: SAME: TO 000200-1

*T RECORD 683 (%1253, #2AB)
00000: 025000 020000 013620 077114 053504 051440 001266 000000
00010: SAME: TO 000020-1
00020: 000000 020114 044516 042440 053517 051113 020104 044523
00030: 050114 040531 020074 034065 030063 031066 027060 034462
00040: 032476 020040 020040 020040 020040 020040 020040 020040
00050: 020040 020040 000000 000000 000000 000000 000000 000000
00060: SAME: TO 000200-1

*T RECORD 684 (%1254, #2AC)
00000: 003400 040001 064221 077114 053504 051400 000000 000000
00010: SAME: TO 000200-1

*T RECORD 685 (%1255, #2AD)
00000: 036000 060156 166222 000000 000000 001265 004000 133402
00010: 000007 000777 000000 000200 000600 000020 000600 000140
00020: 000000 000000 136370 011400 133422 000000 000000 000000
00030: 000000 000000 000000 000001 000000 000000 000000 000000
00040: 000000 000000 000000 000001 000003 000007 000017 000037
00050: 000000 000077 000177 000377 134411 034001 000000 013637
00060: 111561 000012 000440 017000 000000 013462 000000 000041
00070: 017000 031460 000000 013657 000000 000000 000000 000000
00100: SAME: TO 000200-1

*T RECORD 686 (%1256, #2AE)
00000: 036000 060156 064477 000056 000000 120040 005000 033760
00010: 133402 000442 000000 017000 031460 013645 000040 006000
00020: 000000 031460 000000 000040 007000 033462 000000 000000
00030: 000443 017000 031460 000000 000000 000440 017340 103460
00040: 000000 000440 000000 017000 031462 000000 000440 017360
00050: 000000 103462 000000 000442 017000 013461 000000 000000
00060: 000441 017000 031460 013646 000000 140040 005000 001563
00070: 000004 000440 000000 017340 000000 000000 000000 000000
00100: SAME: TO 000200-1
```

184

```
*T RECORD 687 (%1257, #2AF)
00000: 036000 060156 161165 000134 000000 051417 034001 013655
00010: 001563 000024 000000 000440 017360 031460 000000 000040
00020: 000000 007000 033760 133402 005457 017000 000000 031460
00030: 013662 000040 006000 031460 000000 000000 000040 007000
00040: 031460 000000 000000 000440 017340 031760 000000 000500
00050: 000000 017000 031460 013677 114040 005000 000000 023760
00060: 000000 000502 017000 043562 000000 000017 000442 017000
00070: 103460 000000 000000 000440 000000 000000 000000 000000
00100: SAME: TO 000200-1

*T RECORD 688 (%1260, #2B0)
00000: 036000 060156 123752 000212 000000 017340 001177 000000
00010: 000442 017360 000000 111562 000004 000440 017000 031460
00020: 000000 013674 120040 005000 157656 034001 000000 013673
00030: 001577 000024 000440 017360 000000 113561 000002 000441
00040: 017000 031460 000000 013752 020040 005000 103460 013662
00050: 000000 000440 016000 013461 000000 000441 000000 017000
00060: 031460 013752 040040 005000 000000 001577 000007 000440
00070: 017340 031760 000000 000000 000000 000000 000000 000000
00100: SAME: TO 000200-1

*T RECORD 689 (%1261, #2B1)
00000: 036000 060156 133505 000270 000000 000500 017000 001577
00010: 000021 121440 000000 017360 001577 000006 000440 017340
00020: 000000 001557 000020 150440 017300 001700 000000 000000
00030: 000500 017070 031760 000000 000000 000520 017030 031760
00040: 133434 000440 000000 017360 141640 034001 013711 001577
00050: 000000 000002 000440 017340 001577 000022 000000 000440
00060: 017360 001577 000000 000440 000000 017340 033760 000000
00070: 000502 017000 000000 001562 000000 000000 000000 000000
00100: SAME: TO 000200-1

*T RECORD 690 (%1262, #2B2)
00000: 036000 060156 012770 000346 000000 133434 000440 017340
00010: 033760 000000 000000 000503 017000 121562 000020 001440
00020: 000000 017034 033760 007777 000442 017000 000000 043562
00030: 000000 000424 017000 031564 000000 000000 003500 017010
00040: 001577 000001 000000 000440 017340 033760 000000 000504
00050: 000000 017000 103460 000000 000440 017340 000000 033760
00060: 000000 000505 017000 067607 000000 034001 013727 041564
00070: 000000 000500 000000 017030 000000 000000 000000 000000
00100: SAME: TO 000200-1

*T RECORD 691 (%1263, #2B3)
00000: 036000 060156 106211 000424 000000 001577 000023 000440
00010: 017360 031465 000000 000000 000440 017034 043563 000000
00020: 000000 000506 017000 031460 013753 000040 000000 006000
00030: 001577 000002 000440 017340 000000 033760 000000 000505
00040: 017000 001577 000000 000003 000440 017340 003565 000000
00050: 000000 000506 017000 001577 000022 000440 000000 017340
00060: 033760 000000 000507 017140 000000 001567 000000 000500
00070: 017270 111566 000000 000000 000000 000000 000000 000000
00100: SAME: TO 000200-1

*T RECORD 692 (%1264, #2B4)
00000: 036000 060156 143542 000502 000000 000500 017000 031460
```

```
00010: 013750 140040 000000 005000 155042 034001 013745 031465
00020: 000000 000000 000440 017070 001577 000024 000000 000440 ·
00030: 017340 101760 000000 000500 000000 017070 013461 000000
00040: 000441 017000 000000 031460 013725 140040 005000 031460
00050: 000000 000000 000040 007000 001577 000006 000000 000440
00060: 017340 033760 000000 000507 000000 017000 111567 000140
00070: 000440 017000 000000 031460 000000 000000 000000 000000
00100: SAME: TO 000200-1


*T RECORD 693 (%1265, #2B5)
00000: 036000 060156 046536 000560 000000 014042 014040 005000
00010: 031760 145703 000000 000440 017340 033760 000000 000507
00020: 000000 017000 111567 003000 000440 017000 000000 031460
00030: 013776 020040 005000 177050 000000 034001 013763 001577
00040: 000026 000440 000000 017300 031466 000000 000440 017070
00050: 000000 031460 000000 000040 017160 031460 000000 000000
00060: 000040 017160 031460 000000 000000 000040 017160 031460
00070: 000000 000440 000000 017300 000000 000000 000000 000000
00100: SAME: TO 000200-1


*T RECORD 694 (%1266, #2B6)
00000: 036000 060156 036555 000636 000000 031460 000000 000120
00010: 015000 031760 000000 133434 000440 017340 033760 002745
00020: 000000 000500 006000 031460 000000 000040 000000 011000
00030: 033760 000000 000400 007000 000000 043260 000000 000451
00040: 017000 033760 000000 000377 000452 017000 033760 000400
00050: 000000 000447 017000 016060 034001 014001 000000 001566
00060: 025000 000440 017340 033760 000000 040000 000450 017000
00070: 041567 000000 000000 000500 000000 000000 000000 000000
00100: SAME: TO 000200-1


*T RECORD 695 (%1267, #2B7)
00000: 036000 060156 046114 000714 000000 017000 041572 014006
00010: 020500 005030 000000 033470 000000 000451 017000 001577
00020: 000000 000026 000440 017360 001566 025400 000000 000440
00030: 017340 035470 000000 000450 000000 017000 041567 000000
00040: 000500 017000 000000 041572 014014 020500 005030 033170
00050: 000000 000000 000451 017000 001577 000027 000000 000440
00060: 017360 001566 026000 000440 000000 017340 035470 000000
00070: 000450 017000 000000 012654 000000 000000 000000 000000
00100: SAME: TO 000200-1


*T RECORD 696 (%1270, #2B8)
00000: 036000 060156 073053 000772 000000 034001 014017 041567
00010: 000000 000500 000000 017000 041572 014022 020500 005030
00020: 000000 033170 000000 000451 017000 001577 000000 000030
00030: 000440 017360 001566 026400 000000 000440 017340 035470
00040: 000000 000450 000000 017000 041567 000000 000500 017000
00050: 000000 041572 014030 020500 005030 033170 000000 000000
00060: 000451 017000 001577 000031 000000 000440 017360 031460
00070: 000000 000440 000000 017300 000000 000000 000000 000000
00100: SAME: TO 000200-1


*T RECORD 697 (%1271, #2B9)
00000: 036000 060156 122526 001050 000000 031460 000000 000120
00010: 015000 031760 000000 133434 000440 017340 033760 000000
00020: 000000 000500 017340 106136 034001 014035 000000 033760
00030: 003777 000450 017000 041570 000000 000000 000500 017030
```

```
00040: 031571 034123 000000 000500 006070 031460 000000 000040
00050: 000000 011000 033760 000000 000400 007000 000000 001566
00060: 025000 000440 017340 033760 000000 000360 000450 017000
00070: 043570 000000 000000 000507 000000 000000 000000 000000
00100: SAME: TO 000200-1

*T RECORD 698 (%1272, #2BA)
00000: 036000 060156 176540 001126 000000 017000 001566 025400
00010: 000440 017340 000000 031760 000000 001500 017034 033760
00020: 000000 000000 000510 017000 043570 000017 000000 000450
00030: 017000 031167 000000 000450 000000 017030 001577 000026
00040: 000440 017360 000000 141312 034001 014053 001566 026000
00050: 000000 000440 017340 033760 000000 000507 000000 017000
00060: 043567 000360 000447 017000 000000 001566 026400 000440
00070: 017340 031760 000000 000000 000000 000000 000000 000000
00100: SAME: TO 000200-1

*T RECORD 699 (%1273, #2BB)
00000: 036000 060156 027066 001204 000000 001500 017034 033760
00010: 000000 000510 000000 017000 043570 000017 000450 017000
00020: 000000 031167 000000 000450 017030 001577 000000 000027
00030: 000440 017360 031460 000000 000000 000440 017300 031460
00040: 000000 000120 000000 015000 031760 133434 000440 017340
00050: 000000 033760 034123 000500 006000 031460 000000 000000
00060: 000040 011000 066733 004001 000000 014071 033760 000000
00070: 000400 007000 000000 031460 000000 000000 000000 000000
00100: SAME: TO 000200-1

*T RECORD 700 (%1274, #2BC)
00000: 004400 060104 010617 001262 000000 000000 000040 007000
00010: 120171 000000 000000 000000 000000 000000 000000 000000
00020: SAME: TO 000200-1

*T RECORD 701 (%1275, #2BD)
00000: 002000 120000 120000 000000 000000 000000 000000 000000
00010: SAME: TO 000200-1

*T RECORD 702 (%1276, #2BE)
00000: 025000 020000 012071 077104 051520 043040 006136 000000
00010: SAME: TO 000020-1
00020: 000000 020104 051520 046131 027106 051115 052122 027040
00030: 044517 047111 020074 034067 030462 030070 027061 033461
00040: 032476 020040 020040 020040 020040 020040 020040 020040
00050: 020040 020040 000000 000000 000000 000000 000000 000000
00060: SAME: TO 000200-1

*T RECORD 703 (%1277, #2BF)
00000: 003400 040001 053625 077104 051520 043000 000000 000000
00010: SAME: TO 000200-1

*T RECORD 704 (%1300, #2C0)
00000: 036000 060156 110715 000000 000000 006135 034001 014073
00010: 031460 025732 000000 000040 006000 031760 133453 000440
00020: 000000 017030 031460 014310 000040 006000 000000 033460
00030: 000000 000457 017340 031760 000000 133445 000440 017360
00040: 101477 000000 000000 000440 017340 101760 000000 000500
00050: 000000 017000 031460 014273 020040 005000 000000 033760
00060: 000000 000500 017140 033760 000000 000000 000501 017140
```

187

```
00070: 033760 000000 000000 000502 000000 000000 000000 000000
00100: SAME: TO 000200-1


*T RECORD 705 (%1301, #2C1)
00000: 036000 060156 126206 000056 000000 017140 033760 000000
00010: 000516 017140 000000 033760 000000 000503 017000 033760
00020: 000000 000000 000537 017000 010601 034001 000000 014111
00030: 031760 133445 000440 017300 000000 031460 000000 000440
00040: 017170 031461 000000 000000 000440 017170 031460 000000
00050: 000000 000040 017100 031462 000000 000440 000000 017170
00060: 043576 000077 000455 017000 000000 031460 014270 020040
00070: 005000 111575 000000 000120 000000 000000 000000 000000
00100: SAME: TO 000200-1


*T RECORD 706 (%1302, #2C2)
00000: 036000 060156 135645 000134 000000 000440 017000 031460
00010: 014123 040040 000000 005000 033760 000120 000455 017000
00020: 000000 031475 000000 000440 017030 031760 000000 133450
00030: 000440 017360 043576 070000 000000 000444 017000 031464
00040: 000000 003440 000000 017034 073307 034001 014127 033760
00050: 000000 000000 000504 017000 001564 133642 000000 000440
00060: 017340 031460 000000 000100 000000 015000 031463 000000
00070: 000440 007340 000000 033760 000000 000000 000000 000000
00100: SAME: TO 000200-1


*T RECORD 707 (%1303, #2C3)
00000: 036000 060156 055254 000212 000000 000000 001524 017000
00010: 043260 000000 000000 000454 017000 043576 000077 000455
00020: 000000 017000 033760 000000 000505 017000 000000 043565
00030: 177400 000440 017000 031460 000000 000000 002440 017034
00040: 033760 000000 000000 000500 017000 033474 014312 000441
00050: 000000 006000 013475 000000 000455 017000 000000 103474
00060: 014270 020454 005000 145145 000000 034001 014145 031460
00070: 014150 151040 000000 005000 000000 000000 000000 000000
00100: SAME: TO 000200-1


*T RECORD 708 (%1304, #2C4)
00000: 036000 060156 121550 000270 000000 043565 000377 000445
00010: 017000 033465 000000 014142 000440 016000 103464 014136
00020: 000000 000444 016340 031460 014270 000040 000000 016000
00030: 031460 014270 000040 016000 000000 033760 000000 000501
00040: 017000 043260 000000 014156 114440 005000 023760 000000
00050: 000000 000440 017000 043260 014345 000454 000000 006000
00060: 014270 014264 010040 001000 000000 033760 000000 000500
00070: 017140 033760 000000 000000 000000 000000 000000 000000
00100: SAME: TO 000200-1


*T RECORD 709 (%1305, #2C5)
00000: 036000 060156 117470 000346 000000 000501 017000 043260
00010: 014345 000454 000000 006000 007141 034001 014163 014270
00020: 000000 014264 010040 001000 033760 000000 000000 000500
00030: 017140 033760 014275 000501 000000 006000 031460 014171
00040: 000040 016000 000000 033760 000000 000500 017140 033760
00050: 000000 000000 000501 017000 031460 014706 000000 000040
00060: 006000 031460 014610 000040 000000 006000 031473 000000
00070: 006440 017000 000000 031460 000000 000000 000000 000000
00100: SAME: TO 000200-1
```

188

```
*T RECORD 710 (%1306, #2C6)
00000: 036000 060156 052114 000424 000000 014206 040040 005000
00010: 033467 000000 000000 000440 017000 033470 014670 000441
00020: 000000 006000 033460 000000 000447 017000 000000 033461
00030: 000000 000450 017000 027476 000000 034001 014201 003562
00040: 000060 000440 000000 017000 033474 000000 000441 017000
00050: 000000 103474 014312 000454 006000 013473 000000 000000
00060: 000453 017000 014270 014175 000000 140042 001000 033760
00070: 000056 002440 000000 017000 000000 000000 000000 000000
00100: SAME: TO 000200-1

*T RECORD 711 (%1307, #2C7)
00000: 036000 060156 164552 000502 000000 033474 000000 000441
00010: 017000 103474 000000 014312 000454 006000 041576 001700
00020: 000000 001440 017036 031473 000000 000440 000000 017000
00030: 033760 014223 020506 005000 000000 001166 000000 000453
00040: 017000 123473 000000 014217 114442 005000 033466 000000
00050: 000000 000442 017000 156341 034001 014217 000000 113162
00060: 000000 000446 017000 033760 000000 000060 000440 017000
00070: 033474 000000 000000 000441 000000 000000 000000 000000
00100: SAME: TO 000200-1

*T RECORD 712 (%1310, #2C8)
00000: 036000 060156 153336 000560 000000 017000 003162 014325
00010: 000454 006000 000000 033466 000000 000453 017000 014175
00020: 000000 014270 020040 001000 033760 000000 000000 000500
00030: 017140 033760 014610 000501 000000 006000 033760 000056
00040: 000440 017000 000000 033474 000000 000441 017000 103474
00050: 000000 014312 000454 006000 031473 000000 000000 000440
00060: 017030 031460 000000 000100 000000 015000 041576 000700
00070: 001440 017036 000000 064542 000000 000000 000000 000000
00100: SAME: TO 000200-1

*T RECORD 713 (%1311, #2C9)
00000: 036000 060156 073111 000636 000000 034001 014235 033760
00010: 000000 000513 000000 017000 033467 000000 000440 017000
00020: 000000 033470 014670 000441 006000 033460 000000 000000
00030: 000447 017000 033461 000000 000000 000450 017000 003562
00040: 000060 000440 000000 017000 033474 000000 000441 017000
00050: 000000 103474 014312 000454 006000 013473 000000 000000
00060: 000453 017000 014236 014247 000000 020040 001000 033760
00070: 000040 000440 000000 017000 000000 000000 000000 000000
00100: SAME: TO 000200-1

*T RECORD 714 (%1312, #2CA)
00000: 036000 060156 053373 000714 000000 033474 014312 000441
00010: 006000 103474 000000 000000 000454 017000 033760 000105
00020: 000000 000440 017000 033440 034001 014253 000000 033474
00030: 014312 000441 006000 103474 000000 000000 000454 011000
00040: 033760 000000 000000 000401 017000 043260 014260 114440
00050: 000000 005000 023760 000000 000440 017000 000000 033760
00060: 000003 000455 017000 033576 000000 100000 000456 017000
00070: 031460 014345 000000 000040 000000 000000 000000 000000
00100: SAME: TO 000200-1

*T RECORD 715 (%1313, #2CB)
00000: 036000 060156 152154 000772 000000 006000 031460 014270
00010: 000040 016000 000000 033760 000077 000440 017000 033474
```

```
00020: 000000 000000 000441 017000 033475 014325 000000 000442
00030: 006000 003175 000000 000454 000000 017000 033760 133445
00040: 000440 017000 000000 156602 034001 014271 031460 002620
00050: 000000 000040 006000 031460 014100 000040 000000 016000
00060: 031460 025763 000040 006000 000000 031460 000000 000040
00070: 007000 033760 000000 000017 000000 000000 000000 000000
00100: SAME: TO 000200-1
```

*T RECORD 716 (%1314, #2CC)
```
00000: 036000 060156 133041 001050 000000 000446 017000 030461
00010: 015212 000440 000000 006000 031460 000000 000040 007000
00020: 000000 045561 000377 000442 017000 031460 000000 014303
00030: 144040 005000 033562 177600 000000 000442 017000 043561
00040: 177400 000441 000000 017000 003562 000020 000442 017000
00050: 000000 047562 100177 000442 017000 033162 000000 014776
00060: 000441 006000 015637 034001 000000 014307 031460 000000
00070: 000040 007000 000000 031760 000000 000000 000000 000000
00100: SAME: TO 000200-1
```

*T RECORD 717 (%1315, #2CD)
```
00000: 036000 060156 076240 001126 000000 133523 000440 017360
00010: 031460 000000 000000 000040 007000 031760 133523 000440
00020: 000000 017340 035461 000000 000441 017002 000000 001561
00030: 000000 000100 017340 031460 000000 014322 030040 005000
00040: 033760 000377 000000 000442 017000 043562 000000 000502
00050: 000000 017000 031460 000000 002440 017034 000000 031562
00060: 000000 000500 007070 033760 000000 177400 000442 017000
00070: 041562 000000 000000 000500 000000 000000 000000 000000
00100: SAME: TO 000200-1
```

*T RECORD 718 (%1316, #2CE)
```
00000: 036000 060156 000710 001204 000000 017030 031560 000000
00010: 000500 007070 000000 004343 034001 014325 033760 000377
00020: 000000 000443 017000 033760 177400 000444 000000 017000
00030: 031460 000000 002440 017034 000000 033760 000000 000505
00040: 017000 031760 000000 133523 000440 017340 035461 000000
00050: 000000 000441 017002 001561 000000 000100 000000 017340
00060: 031460 014341 030040 005000 000000 041563 000000 000500
00070: 017030 013462 000000 000000 000000 000000 000000 000000
00100: SAME: TO 000200-1
```

*T RECORD 719 (%1317, #2CF)
```
00000: 036000 060156 122227 001262 000000 000442 017000 031565
00010: 014341 120500 000000 005030 031460 000000 000040 007060
00020: 000000 041564 000000 000500 017030 031560 000000 000000
00030: 000500 017070 005366 034001 000000 014343 013462 000000
00040: 000442 017140 000000 014335 000000 020040 003000 031460
00050: 000000 014406 000040 006000 033460 000000 000000 000450
00060: 017000 033461 000000 000451 000000 017000 033474 000000
00070: 000447 017000 000000 003175 000000 000000 000000 000000
00100: SAME: TO 000200-1
```

*T RECORD 720 (%1320, #2D0)
```
00000: 036000 060156 105222 001340 000000 000000 000447 017000
00010: 103760 000000 000000 000446 017000 111565 000040 000440
00020: 000000 017000 021155 000000 020446 017000 000000 031460
00030: 014375 014040 005000 011466 000000 000000 000440 017000
00040: 031170 014364 000000 020451 005000 031460 014364 120040
```

```
00050: 000000 005000 154175 034001 014361 033465 000000 000000
00060: 000440 017000 033760 000040 000000 000445 017000 031460
00070: 014372 000040 000000 016000 000000 000000 000000 000000
00100: SAME: TO 000200-1


*T RECORD 721 (%1321, #2D1)
00000: 036000 060156 125100 001416 000000 033760 000012 000441
00010: 017000 033470 000000 000000 000440 017000 030471 014417
00020: 000000 000440 006000 033460 000000 000450 000000 017000
00030: 033260 000000 000451 017000 000000 003561 000060 000440
00040: 017000 033467 000000 000000 000441 017000 113166 014312
00050: 000000 000441 006000 103466 014353 000446 000000 016000
00060: 031170 000000 000451 017000 000000 031460 014501 120040
00070: 005000 017304 000000 034001 000000 000000 000000 000000
00100: SAME: TO 000200-1


*T RECORD 722 (%1322, #2D2)
00000: 036000 060156 124721 001474 000000 014377 111565 000040
00010: 000440 017000 000000 031460 014404 020040 005000 033465
00020: 000000 000000 000440 017000 033467 000000 000000 000441
00030: 017000 113166 014312 000441 000000 006000 033467 000000
00040: 000454 017000 000000 011474 000000 000440 007000 033760
00050: 000000 000040 000445 017000 031460 000000 000000 000440
00060: 017000 031460 014413 114040 000000 005000 033760 000055
00070: 000445 017000 000000 031460 000000 000000 000000 000000
00100: SAME: TO 000200-1


*T RECORD 723 (%1323, #2D3)
00000: 036000 060156 102111 001552 000000 000000 000040 007000
00010: 041576 100000 000000 000440 017000 031460 000000 020040
00020: 000000 007000 114065 034001 014415 033760 000000 000053
00030: 000445 017000 031460 000000 000000 000040 007000 043260
00040: 000000 007442 000000 017000 033760 000020 000444 017000
00050: 000000 031461 000000 000440 017000 031460 000000 014501
00060: 020040 005000 031460 014426 000000 114040 005000 123461
00070: 000000 002441 000000 017000 000000 000000 000000 000000
00100: SAME: TO 000200-1


*T RECORD 724 (%1324, #2D4)
00000: 036000 060156 134044 001630 000000 031460 014471 014040
00010: 005000 031160 000000 000000 000441 017000 031460 014477
00020: 000000 020040 005000 031460 000000 000440 000000 017000
00030: 031460 014441 114040 005000 000000 073460 000000 001440
00040: 017000 006747 000000 034001 014433 070260 000000 000440
00050: 000000 017000 100260 000000 000440 017000 000000 003440
00060: 000000 024440 017000 031460 000000 014441 114040 005000
00070: 033760 040000 000000 000440 000000 000000 000000 000000
00100: SAME: TO 000200-1


*T RECORD 725 (%1325, #2D5)
00000: 036000 060156 053531 001706 000000 017000 103464 000000
00010: 000444 017000 000000 037461 000000 000443 017002 037463
00020: 000000 000000 000443 017002 031460 014447 000000 014040
00030: 005000 034460 000000 000440 000000 017003 035442 000000
00040: 034442 017002 000000 103464 014442 000444 016000 003720
00050: 000000 000000 000443 017000 013443 000000 000000 150443
00060: 017000 141505 034001 014451 000000 121160 000000 006441
00070: 017000 031460 000000 014454 000000 000000 000000 000000
```

```
00100: SAME: TO 000200-1

*T RECORD 726 (%1326, #2D6)
00000: 036000 060156 125225 001764 000000 014040 005000 113161
00010: 000000 002440 000000 017000 037422 000000 000442 017002
00020: 000000 031460 000000 031040 017000 036460 000000 000000
00030: 000440 017003 013464 000000 000000 000444 017000 031460
00040: 014451 114040 000000 005000 035460 000000 000441 017002
00050: 000000 033260 000000 000440 017000 031463 000000 000000
00060: 000440 017000 030462 014500 000000 020440 005000 070260
00070: 000000 000440 000000 017000 000000 000000 000000 000000
00100: SAME: TO 000200-1

*T RECORD 727 (%1327, #2D7)
00000: 036000 060156 002764 002042 000000 073460 000000 000440
00010: 017000 007631 000000 034001 014467 100260 000000 000440
00020: 000000 017000 003440 014500 024440 016000 000000 043660
00030: 077777 000441 017000 036460 000000 000000 000440 017003
00040: 070460 000000 000000 000440 017000 100260 000000 000440
00050: 000000 017000 003740 177777 024440 017000 000000 031460
00060: 014500 000040 016000 043260 000000 000000 000441 017000
00070: 011460 000000 000000 000440 000000 000000 000000 000000
00100: SAME: TO 000200-1

*T RECORD 728 (%1330, #2D8)
00000: 036000 060156 152672 002120 000000 007000 101760 077777
00010: 000440 017000 000000 031460 000000 000040 007000 043561
00020: 000000 000377 000442 017000 031460 000000 000000 046440
00030: 017030 035723 034001 014505 000000 031461 000000 000500
00040: 015030 031460 000000 000000 000100 015000 031460 000000
00050: 000000 000020 015000 035462 000000 000442 000000 017000
00060: 031460 014523 144040 005000 000000 031562 077600 000440
00070: 017030 033460 000000 000000 000000 000000 000000 000000
00100: SAME: TO 000200-1

*T RECORD 729 (%1331, #2D9)
00000: 036000 060156 077071 002176 000000 000502 015000 033461
00010: 000000 000443 000000 017000 033760 040000 000440 017000
00020: 000000 033760 000002 000441 017000 031460 000000 015140
00030: 000040 006000 031460 000000 000000 000040 011000 033760
00040: 000000 000002 000000 017000 031460 014536 010040 005000
00050: 000000 040050 034001 014523 033460 000000 000000 000450
00060: 017000 033461 000000 000451 000000 017000 000162 000000
00070: 000442 017000 000000 000062 000000 000000 000000 000000
00100: SAME: TO 000200-1

*T RECORD 730 (%1332, #2DA)
00000: 036000 060156 031423 002254 000000 000000 000440 017000
00010: 043260 014531 000000 114440 005000 023760 000000 000440
00020: 000000 017000 033760 000012 000441 017000 000000 031460
00030: 014417 000040 006000 033260 000000 000000 000452 017000
00040: 031460 014537 000000 114040 005000 123472 014537 000452
00050: 000000 016000 033760 000047 000452 017000 000000 037472
00060: 000000 000443 017002 001563 000000 133524 000440 017300
00070: 130461 034001 000000 014541 000000 000000 000000 000000
00100: SAME: TO 000200-1

*T RECORD 731 (%1333, #2DB)
```

192

```
00000: 036000 060156 044123 002332 000000 031460 000000 000040
00010: 017200 033470 000000 000000 000440 017000 033471 000000
00020: 000000 000441 017140 033760 000000 000502 000000 017140
00030: 111572 000047 000440 017000 000000 031460 014553 020040
00040: 005000 033760 000000 015027 000503 006000 031460 000000
00050: 000000 000440 017000 031460 014553 014040 000000 005000
00060: 103472 014542 000452 016000 000000 031460 000000 000040
00070: 017200 031460 000000 000000 000000 000000 000000 000000
00100: SAME: TO 000200-1


*T RECORD 732 (%1334, #2DC)
00000: 036000 060156 060122 002410 000000 000040 011000 031760
00010: 000000 003400 000000 011010 033760 000000 000401 011000
00020: 000000 123165 034001 014557 033760 000000 000000 000400
00030: 017240 033760 000000 000503 000000 017240 033760 000000
00040: 000502 017000 000000 031472 000000 000440 017030 031460
00050: 000000 000000 000100 015000 031460 014576 000000 020040
00060: 005000 031460 014571 054040 000000 005000 031460 015140
00070: 000040 006000 000000 031460 000000 000000 000000 000000
00100: SAME: TO 000200-1


*T RECORD 733 (%1335, #2DD)
00000: 036000 060156 057164 002466 000000 000000 000040 011000
00010: 033760 014607 000000 000402 016000 031460 015112 000040
00020: 000000 006000 033760 000002 000442 017000 000000 041561
00030: 000377 000440 017000 031460 000000 014576 020040 005000
00040: 077002 034001 000000 014575 031460 014602 144040 005000
00050: 000000 033760 050000 000442 017000 033760 000000 000010
00060: 000443 017000 031460 015112 000000 000040 006000 103760
00070: 000000 000442 000000 017000 000000 000000 000000 000000
00100: SAME: TO 000200-1


*T RECORD 734 (%1336, #2DE)
00000: 036000 060156 064465 002544 000000 031460 000000 000040
00010: 011000 031760 000000 000000 000400 017000 031460 014606
00020: 000000 120040 005000 033760 014607 000402 000000 016000
00030: 113562 000000 000402 017000 000000 031460 000000 000040
00040: 007000 031460 000000 014406 000040 006000 031465 000000
00050: 000000 000440 017030 031460 000000 000100 000000 015000
00060: 022256 034001 014613 111565 000000 000055 000440 017000
00070: 031460 014621 000000 120040 000000 000000 000000 000000
00100: SAME: TO 000200-1


*T RECORD 735 (%1337, #2DF)
00000: 036000 060156 135014 002622 000000 005000 033460 000000
00010: 000442 017000 000000 033461 000000 000443 017000 043260
00020: 000000 000000 000440 017000 043260 015027 000000 000441
00030: 006000 031460 014503 000040 000000 006000 033460 000000
00040: 000447 017000 000000 033461 000000 000450 017000 033462
00050: 000000 000000 000453 017000 043576 000077 000000 000443
00060: 017000 041576 001700 001440 000000 017036 033760 000000
00070: 000504 017000 000000 043576 000000 000000 000000 000000
00100: SAME: TO 000200-1


*T RECORD 736 (%1340, #2E0)
00000: 036000 060156 101242 002700 000000 070000 000445 017000
00010: 116137 034001 000000 014631 111565 070000 000440 017000
00020: 000000 043260 014636 120454 005000 113563 000000 000006
```

193

```
00030: 000442 017000 043564 000007 000000 000444 017000 113164
00040: 014642 000442 000000 016000 013463 000000 000442 017000
00050: 000000 031473 000000 000440 017000 113164 000000 014642
00060: 040442 005000 113173 000000 000000 000442 017000 031460
00070: 000000 004040 000000 011000 000000 000000 000000 000000
00100: SAME: TO 000200-1

*T RECORD 737 (%1341, #2E1)
00000: 036000 060156 022201 002756 000000 033760 000000 000405
00010: 017000 111565 000000 000040 000440 017000 031460 014647
00020: 000000 020040 005000 013462 000000 000442 000000 017000
00030: 067744 034001 014647 031462 000000 000000 000440 017000
00040: 031460 014655 000000 020040 005000 031460 014665 014040
00050: 000000 005000 033760 000040 000440 017000 000000 033474
00060: 000000 000441 017000 003162 000000 014325 000454 006000
00070: 031460 000000 000000 000040 000000 000000 000000 000000
00100: SAME: TO 000200-1

*T RECORD 738 (%1342, #2E2)
00000: 036000 060156 116443 003034 000000 011000 033760 000000
00010: 000405 017000 000000 111565 000040 000440 017000 031460
00020: 000000 014664 020040 005000 033465 000000 000000 000440
00030: 017000 033474 000000 000441 000000 017000 103474 014312
00040: 000454 006000 000000 031460 000000 000040 007000 106455
00050: 000000 034001 014665 031460 000000 000040 000000 011000
00060: 031460 000000 000040 011000 000000 031460 014264 000040
00070: 016000 033460 000000 000000 000000 000000 000000 000000
00100: SAME: TO 000200-1

*T RECORD 739 (%1343, #2E3)
00000: 036000 060156 155517 003112 000000 000447 017000 033461
00010: 014747 000450 000000 006000 031460 000000 000440 017030
00020: 000000 031460 000000 000100 015000 031460 000000 014744
00030: 000040 006000 033460 000000 000000 000442 017000 033461
00040: 000000 000443 000000 017000 033467 000000 000440 017000
00050: 000000 033470 015027 000441 006000 033760 000000 050000
00060: 000442 017000 033760 000010 000000 000443 017000 014626
00070: 034001 014703 000000 031460 000000 000000 000000 000000
00100: SAME: TO 000200-1

*T RECORD 740 (%1344, #2E4)
00000: 036000 060156 003074 003170 000000 015112 000040 006000
00010: 031460 000000 000000 000040 011000 033760 000000 000402
00020: 000000 007000 031460 000000 000440 017030 000000 031461
00030: 000000 000500 015030 031460 000000 000000 000500 015000
00040: 031460 014714 000000 014040 005000 033760 040000 000440
00050: 000000 017000 043260 014716 000441 016000 000000 033760
00060: 100000 000440 017000 033760 000000 000377 000441 017000
00070: 041576 001700 000000 001440 000000 000000 000000 000000
00100: SAME: TO 000200-1

*T RECORD 741 (%1345, #2E5)
00000: 036000 060156 063244 003246 000000 017035 033760 000000
00010: 000503 017000 000000 001563 133524 000440 017340 036140
00020: 000000 034001 014721 033760 000000 000502 000000 017140
00030: 033760 015140 000503 006000 000000 031460 000000 000040
00040: 011000 033760 000000 000000 000403 011000 033760 015024
00050: 000000 000402 006000 031460 000000 000040 000000 007000
```

```
00060: 033760 050000 000456 017000 000000 033760 000010 000457
00070: 017000 101760 000000 133524 000000 000000 000000 000000
00100: SAME: TO 000200-1


*T RECORD 742 (%1346, #2E6)
00000: 036000 060156 172251 003324 000000 000440 017300 033760
00010: 000046 000455 000000 017000 033476 000000 000440 017000
00020: 000000 033477 000000 000441 017000 031460 000000 000000
00030: 000440 017170 013475 000000 000000 000455 017000 164053
00040: 012001 014737 000000 031461 014743 020440 005170 033476
00050: 000000 000000 000442 017000 033477 015112 000000 000443
00060: 006000 031460 014735 000040 000000 016000 031460 000000
00070: 000040 007000 000000 171024 000000 000000 000000 000000
00100: SAME: TO 000200-1


*T RECORD 743 (%1347, #2E7)
00000: 036000 060156 073044 003402 000000 000400 133452 133453
00010: 067125 001000 000000 133524 040000 000002 173526 004000
00020: 000000 133642 014133 014151 014152 014153 000000 014160
00030: 014164 014167 014225 075453 000000 034001 014744 033760
00040: 000017 000446 000000 017000 040260 015212 000440 006000
00050: 000000 031460 000000 000040 007000 031461 000000 000000
00060: 000440 017000 031460 014752 000000 144040 005000 043260
00070: 014771 000440 000000 016000 000000 000000 000000 000000
00100: SAME: TO 000200-1


*T RECORD 744 (%1350, #2E8)
00000: 036000 060156 020573 003460 000000 033461 000000 000442
00010: 017000 043562 000000 177400 000442 017000 045561 000377
00020: 000000 000441 017002 123561 000017 000441 000000 017000
00030: 031460 014764 020040 005000 000000 031460 015254 014040
00040: 005000 030462 000000 000000 000440 017000 034460 000000
00050: 000000 000440 017003 104007 034001 014762 000000 013461
00060: 000000 000441 017000 031460 000000 014761 120040 005000
00070: 031460 000000 000000 000440 000000 000000 000000 000000
00100: SAME: TO 000200-1


*T RECORD 745 (%1351, #2E9)
00000: 036000 060156 065343 003536 000000 017000 031460 014771
00010: 114040 005000 000000 031062 000000 000440 017000 031460
00020: 000000 014771 020040 005000 103460 000000 000000 000440
00030: 017000 101760 000012 000440 000000 017000 031460 000000
00040: 000040 007000 000000 033760 000037 000446 017000 030461
00050: 000000 015212 000440 006000 031460 000000 000000 000040
00060: 007000 031461 000000 000440 000000 017000 031460 015002
00070: 144040 005000 000000 037566 000000 000000 000000 000000
00100: SAME: TO 000200-1


*T RECORD 746 (%1352, #2EA)
00000: 036000 060156 025056 003614 000000 034001 015000 043260
00010: 000000 000441 000000 017000 043260 015022 000440 016000
00020: 000000 043561 177400 000442 017000 045561 000000 000377
00030: 000441 017002 030462 000000 000000 005440 017000 123561
00040: 000037 000441 000000 017000 031460 015015 020040 005000
00050: 000000 031460 015254 014040 005000 034460 000000 000000
00060: 000440 017003 031460 015013 000000 130040 005000 031460
00070: 000000 001040 000000 017000 000000 000000 000000 000000
00100: SAME: TO 000200-1
```

```
*T RECORD 747 (%1353, #2EB)
00000: 036000 060156 060477 003672 000000 013461 000000 000441
00010: 017000 031460 000000 015010 120040 005000 031460 000000
00020: 000000 000440 017000 005055 034001 015016 000000 033260
00030: 015022 114441 005000 031460 000000 014771 050040 005000
00040: 103461 000000 000000 000441 017000 003440 000000 024440
00050: 000000 017000 101760 000012 000440 017000 000000 031460
00060: 000000 000040 007000 031460 000000 000000 005040 017000
00070: 031460 015031 000000 000040 000000 000000 000000 000000
00100: SAME: TO 000200-1

*T RECORD 748 (%1354, #2EC)
00000: 036000 060156 011336 003750 000000 006000 031460 000000
00010: 000040 007000 000000 031460 015031 001040 006000 031460
00020: 000000 000000 000040 007000 031460 015177 000000 000040
00030: 006000 031462 000000 000440 000000 017000 031460 015035
00040: 120040 005000 000000 142206 034001 015034 113760 000200
00050: 000000 000446 017000 031464 000000 000440 000000 017000
00060: 031460 015040 120040 005000 000000 113760 000200 000447
00070: 017000 031460 000000 015055 000000 000000 000000 000000
00100: SAME: TO 000200-1

*T RECORD 749 (%1355, #2ED)
00000: 036000 060156 154234 004026 000000 150040 005000 073464
00010: 000000 000444 000000 017000 073465 000000 000445 017000
00020: 000000 103465 000000 000445 017000 003444 000000 000000
00030: 024444 017000 031460 015055 000000 114040 005000 031465
00040: 000000 000440 000000 017000 031460 015055 120040 005000
00050: 000000 037464 000000 000440 017002 031460 000000 000000
00060: 000440 017000 002723 034001 000000 015052 031460 015055
00070: 120040 005000 000000 035464 000000 000000 000000 000000
00100: SAME: TO 000200-1

*T RECORD 750 (%1356, #2EE)
00000: 036000 060156 041602 004104 000000 000000 000444 017002
00010: 103467 000000 000000 000447 017000 123166 000000 000447
00020: 000000 017000 031460 015061 014040 005000 000000 033464
00030: 000000 000440 017000 030465 000000 015067 000440 016000
00040: 033462 000000 000000 000440 017000 030463 000000 000440
00050: 000000 017000 033464 000000 000442 017000 000000 033465
00060: 000000 000443 017000 123467 000000 000000 000447 017000
00070: 003167 000000 000000 000446 000000 000000 000000 000000
00100: SAME: TO 000200-1

*T RECORD 751 (%1357, #2EF)
00000: 036000 060156 070164 004162 000000 017000 111567 000030
00010: 000440 017000 000000 174132 034001 015070 031460 015073
00020: 000000 040040 005000 033462 000000 000440 000000 017000
00030: 030463 015110 000440 016000 000000 031467 000000 000440
00040: 017000 031460 000000 015100 020040 005000 034460 000000
00050: 000000 000440 017003 013467 000000 000447 000000 017000
00060: 031460 015075 140040 005000 000000 000063 000000 000440
00070: 017000 003142 000000 000000 000000 000000 000000 000000
00100: SAME: TO 000200-1

*T RECORD 752 (%1360, #2F0)
00000: 036000 060156 155057 004240 000000 024440 017000 031460
```

```
00010: 015110 110040 000000 005000 040660 177776 015440 017000
00020: 000000 031460 015106 050040 005000 030660 000000 000001
00030: 000440 017000 124167 034001 000000 015106 034460 000000
00040: 000440 017001 000000 103466 000000 000446 017000 031460
00050: 000000 015212 000040 006000 031460 000000 000000 000040
00060: 007000 031460 015177 000040 000000 006000 103167 000000
00070: 000446 017000 000000 035463 000000 000000 000000 000000
00100: SAME: TO 000200-1


*T RECORD 753 (%1361, #2F1)
00000: 036000 060156 161515 004316 000000 000000 000440 017002
00010: 030464 003435 000000 000440 006000 033461 000000 000450
00020: 000000 017000 033260 000000 000451 017000 000000 035465
00030: 000000 000440 017002 030462 000000 003435 000440 006000
00040: 003071 000000 000000 000451 017000 003141 000000 024450
00050: 000000 017000 011062 034001 015124 033462 000000 000000
00060: 000440 017000 030464 003435 000000 000440 006000 033461
00070: 000000 000440 000000 017000 000000 000000 000000 000000
00100: SAME: TO 000200-1


*T RECORD 754 (%1362, #2F2)
00000: 036000 060156 113243 004374 000000 033260 000000 000441
00010: 017000 035461 000000 000000 000441 017002 007170 000000
00020: 000000 000441 017002 030461 015136 114440 000000 005000
00030: 031460 015135 010040 005000 000000 013460 015136 000440
00040: 016000 103460 000000 000000 000440 017000 031460 015212
00050: 000000 000040 006000 031460 000000 000040 000000 007000
00060: 031460 015177 000040 006000 000000 033464 000000 000441
00070: 017000 100320 000000 034001 000000 000000 000000 000000
00100: SAME: TO 000200-1


*T RECORD 755 (%1363, #2F3)
00000: 036000 060156 001221 004452 000000 015142 031460 015254
00010: 020040 005000 000000 113167 000000 000446 017000 033462
00020: 000000 000000 000440 017000 030463 000000 000000 000440
00030: 017000 034460 000000 000440 000000 017003 103466 015367
00040: 000446 006000 000000 031460 000000 000440 017000 033260
00050: 000000 015153 144454 005000 013460 000000 000000 000440
00060: 017000 040260 000000 000440 000000 017000 033464 015367
00070: 000441 006000 000000 033260 000000 000000 000000 000000
00100: SAME: TO 000200-1


*T RECORD 756 (%1364, #2F4)
00000: 036000 060156 057221 004530 000000 000000 000453 017000
00010: 035465 000000 000000 000440 017002 035460 000000 000440
00020: 000000 017002 066315 034001 015160 040260 000000 000000
00030: 000440 017000 033464 015367 000000 000441 006000 120260
00040: 000000 000440 000000 017000 033474 003435 000440 006000
00050: 000000 031461 000000 000440 017000 031473 000000 000000
00060: 015440 017000 037461 000000 000000 016441 017002 037461
00070: 000000 000441 000000 017002 000000 000000 000000 000000
00100: SAME: TO 000200-1


*T RECORD 757 (%1365, #2F5)
00000: 036000 060156 003331 004606 000000 023740 000000 150450
00010: 017000 013450 000000 000000 154450 017000 000161 000000
00020: 000000 005453 017000 003450 000000 024450 000000 017000
00030: 036470 000000 000450 017003 000000 003170 015212 000440
```

197

```
00040: 006000 121762 000000 034001 015176 031460 000000 000040
00050: 000000 007000 033462 000000 000444 017000 000000 043563
00060: 177400 000445 017000 045563 000000 000377 000447 017000
00070: 031460 015204 000000 144040 000000 000000 000000 000000
00100: SAME: TO 000200-1

*T RECORD 758 (%1366, #2F6)
00000: 036000 060156 141712 004664 000000 005000 033567 177600
00010: 000447 017000 000000 033460 000000 000442 017000 043561
00020: 000000 177400 000443 017000 045561 000377 000000 000446
00030: 017000 031460 000000 144040 000000 007000 033566 177600
00040: 000446 017000 000000 031460 000000 000040 007000 031060
00050: 000000 000000 000440 017000 033260 000000 000000 020441
00060: 007000 074240 034001 015214 000000 043260 000000 005444
00070: 017000 037460 000000 000000 000000 000000 000000 000000
00100: SAME: TO 000200-1

*T RECORD 759 (%1367, #2F7)
00000: 036000 060156 054511 004742 000000 000443 017000 061160
00010: 000000 000443 000000 017000 031460 015222 014040 005000
00020: 000000 036460 000000 000440 017003 103464 000000 015215
00030: 000444 016000 033760 000200 000000 000443 017000 031460
00040: 000000 000440 000000 017000 113164 015226 114446 005000
00050: 000000 033760 000177 000443 017000 000063 000000 000000
00060: 000440 017000 031460 015241 000000 124040 005000 003440
00070: 000000 024440 000000 017000 000000 000000 000000 000000
00100: SAME: TO 000200-1

*T RECORD 760 (%1370, #2F8)
00000: 036000 060156 071574 005020 000000 031460 015234 110040
00010: 005000 120165 000000 034001 015232 035460 000000 000440
00020: 000000 017002 103466 015241 000446 016000 000000 037460
00030: 000000 000443 017002 061160 000000 000000 005443 017000
00040: 031460 015241 000000 014040 005000 036460 000000 000440
00050: 000000 017003 013466 000000 000446 017000 000000 001566
00060: 000200 000440 017000 031460 000000 015257 014040 005000
00070: 111566 000200 000000 000440 000000 000000 000000 000000
00100: SAME: TO 000200-1

*T RECORD 761 (%1371, #2F9)
00000: 036000 060156 072413 005076 000000 017000 031460 015254
00010: 114040 005000 000000 037466 000000 000446 017000 043566
00020: 000000 000377 000446 017000 033260 000000 000000 000441
00030: 017000 071140 034001 015250 000000 043561 177400 000441
00040: 017000 033166 000000 000000 000441 017000 101760 000012
00050: 000000 000440 017000 031460 000000 000040 000000 007000
00060: 033760 077777 000440 017000 000000 033760 177776 000441
00070: 017000 031460 000000 015261 000000 000000 000000 000000
00100: SAME: TO 000200-1

*T RECORD 762 (%1372, #2FA)
00000: 036000 060156 161340 005154 000000 000040 016000 043260
00010: 000000 000440 000000 017000 043260 000000 000441 017000
00020: 000000 101760 077777 000440 017000 031460 000000 000000
00030: 000040 007000 031460 000000 000000 000440 017000 031460
00040: 000000 014040 000000 007000 031460 025732 000040 006000
00050: 000000 114444 034001 015266 045561 000377 000000 000455
00060: 017000 031460 015271 144040 000000 005000 033575 177600
```

```
00070: 000455 017000 000000 043561 000000 000000 000000 000000
00100: SAME: TO 000200-1

*T RECORD 763 (%1373, #2FB)
00000: 036000 060156 006642 005232 000000 177400 000441 017000
00010: 111560 077777 000000 000440 017000 031460 015301 120040
00020: 000000 005000 111561 177400 000440 017000 000000 031460
00030: 015301 120040 005000 003575 000000 000002 000455 017000
00040: 033760 040000 000000 000456 017000 043260 015351 000457
00050: 000000 016000 041560 037000 002440 017034 000000 033760
00060: 000000 000502 017000 001562 000000 133652 000440 017340
00070: 044746 034001 000000 015304 000000 000000 000000 000000
00100: SAME: TO 000200-1

*T RECORD 764 (%1374, #2FC)
00000: 036000 060156 041260 005310 000000 033760 000000 000516
00010: 017140 033760 000000 000000 000517 017000 031460 000000
00020: 000000 000440 017030 031461 000000 000500 000000 015030
00030: 031460 000000 000100 015000 000000 033476 000000 000442
00040: 017000 033477 000000 015140 000443 006000 031460 000000
00050: 000000 000440 017030 031461 000000 000500 000000 015030
00060: 033476 000000 000502 015000 000000 033477 015027 000443
00070: 006000 031460 000000 000000 000000 000000 000000 000000
00100: SAME: TO 000200-1

*T RECORD 765 (%1375, #2FD)
00000: 036000 060156 011023 005366 000000 000440 017000 031460
00010: 015325 114040 000000 005000 033460 000000 000442 017000
00020: 000000 053725 034001 015322 033461 000000 000000 000443
00030: 017000 043260 000000 000440 000000 017000 043260 015027
00040: 000441 006000 000000 033760 040000 000442 017000 033760
00050: 000000 000351 000443 017000 031460 015027 000000 000040
00060: 006000 031460 000000 000440 000000 017000 033476 000000
00070: 042442 017000 000000 033477 000000 000000 000000 000000
00100: SAME: TO 000200-1

*T RECORD 766 (%1376, #2FE)
00000: 036000 060156 100233 005444 000000 000000 000443 011000
00010: 033760 000000 000000 000401 011000 033760 015024 000400
00020: 000000 006000 043561 177400 000457 017000 000000 045561
00030: 000377 000441 017000 031460 000000 015341 144040 005000
00040: 057674 034001 000000 015340 033561 177600 000441 017000
00050: 000000 017461 000000 000441 017000 043561 000000 000377
00060: 000441 017000 033161 000000 000000 000457 017000 033460
00070: 007777 004456 000000 011000 000000 000000 000000 000000
00100: SAME: TO 000200-1

*T RECORD 767 (%1377, #2FF)
00000: 036000 060156 076021 005522 000000 033760 000000 004400
00010: 011000 033760 000000 015311 154401 005000 031460 000000
00020: 000000 000040 011000 031460 000000 000040 000000 011000
00030: 033476 000000 000440 017000 000000 033477 000000 000441
00040: 017000 031760 000000 133752 000440 017300 035475 000000
00050: 000000 000455 017003 047575 100177 031455 000000 017000
00060: 013052 034001 015356 033175 000000 015362 150441 005000
00070: 031460 000000 000000 000040 000000 000000 000000 000000
00100: SAME: TO 000200-1
```

```
*T RECORD 768 (%1400, #300)
00000: 036000 060156 161537 005600 000000 017040 033760 000000
00010: 000502 017140 000000 033760 015112 000503 006000 031460
00020: 000000 000000 000440 017030 031461 007760 000000 000500
00030: 014030 031460 007761 000100 000000 014000 031460 025763
00040: 000040 006000 000000 031460 000000 000040 007000 031460
00050: 000000 000000 000440 017000 031460 015375 000000 115040
00060: 005000 070260 000000 000440 000000 017000 073460 000000
00070: 000440 017000 000000 100260 000000 000000 000000 000000
00100: SAME: TO 000200-1

*T RECORD 769 (%1401, #301)
00000: 036000 060156 053234 005656 000000 000000 000440 017000
00010: 010537 034001 000000 015374 003440 000000 024440 017000
00020: 000000 031461 000000 000440 017000 031460 000000 015400
00030: 116040 005000 123461 000000 000000 000441 017000 033760
00040: 000020 000452 000000 017000 033460 000000 000450 017000
00050: 000000 113161 000000 000450 017000 031460 000000 015405
00060: 124040 005000 033470 000000 000000 000040 017000 005740
00070: 000000 024451 000000 017000 000000 000000 000000 000000
00100: SAME: TO 000200-1

*T RECORD 770 (%1402, #302)
00000: 036000 060156 032566 005734 000000 033171 000000 000440
00010: 017000 036460 000000 000000 000440 017001 013472 000000
00020: 000000 000452 017000 031460 015401 140040 000000 005000
00030: 101237 022001 015412 035460 000000 000000 000440 017002
00040: 031460 015415 000000 050040 005000 123460 000000 000440
00050: 000000 017000 003700 000000 000450 017000 000000 003720
00060: 000000 000451 017000 061170 000000 000000 000451 017000
00070: 031460 015422 000000 020040 000000 000000 000000 000000
00100: SAME: TO 000200-1

*T RECORD 771 (%1403, #303)
00000: 036000 060156 172115 006012 000000 005000 120260 000000
00010: 000440 017000 000000 031460 000000 000040 007000 026415
00020: 000000 034000 133652 055202 075000 055751 000000 135400
00030: 056513 112000 057250 042000 000000 060000 000000 060522
00040: 177400 061241 000000 070400 061753 101400 062461 060400
00050: 000000 063163 031400 063661 016400 064353 000000 042400
00060: 065041 145400 065524 147000 000000 066204 066400 066660
00070: 141400 067331 000000 166000 000000 000000 000000 000000
00100: SAME: TO 000200-1

*T RECORD 772 (%1404, #304)
00000: 031000 060146 114526 006070 000000 070000 000000 070443
00010: 014000 071103 000000 045400 071540 126400 072173 052400
00020: 000000 072623 052400 073250 140000 073673 000000 124000
00030: 074314 017400 074732 032400 000000 075345 174400 111552
00040: 006000 133742 000000 075757 075400 076366 144400 076773
00050: 000000 170000 077376 177000 055202 075002 000000 055202
00060: 075000 104306 000000 000000 000000 000000 000000 000000
00070: SAME: TO 000200-1

*T RECORD 773 (%1405, #305)
00000: 002000 120000 120000 000000 000000 000000 000000 000000
00010: SAME: TO 000200-1
```

200

```
*T RECORD 774 (%1406, #306)
00000: 025000 020000 152004 077126 044520 051040 004562 000000
00010: SAME: TO 000020-1
00020: 000000 020040 021126 044504 042517 020120 051117 041505
00030: 051523 047522 020055 020126 042507 040440 046511 041522
00040: 047440 036070 033460 032062 034056 030464 030471 037040
00050: 020040 020040 000000 000000 000000 000000 000000 000000
00060: SAME: TO 000200-1

*T RECORD 775 (%1407, #307)
00000: 003400 040001 054647 077126 044520 051000 000000 000000
00010: SAME: TO 000200-1

*T RECORD 776 (%1410, #308)
00000: 036000 060156 070357 000000 000000 004561 034001 015423
00010: 031465 000000 000000 000440 017030 031466 000000 000500
00020: 000000 015030 031467 000000 000500 015030 000000 031460
00030: 000000 000100 015000 033760 000000 024373 000440 017000
00040: 001700 001000 000000 000440 017300 033760 000020 000447
00050: 000000 017000 033760 003000 000444 017000 000000 103760
00060: 000000 000445 017140 033760 000000 000000 000506 017000
00070: 031460 015441 000000 150040 000000 000000 000000 000000
00100: SAME: TO 000200-1

*T RECORD 777 (%1411, #309)
00000: 036000 060156 026003 000056 000000 005000 003560 000120
00010: 000440 017000 000000 041566 100000 000440 017000 031460
00020: 000000 016307 120040 005000 156234 034001 000000 015441
00030: 041166 000000 000445 017000 000000 015447 015461 120040
00040: 002000 053165 000000 000000 000446 017000 001560 000004
00050: 000000 022440 017340 113564 000000 000504 000000 017000
00060: 015453 015453 040042 001000 000000 003560 000005 000440
00070: 017000 037465 000000 000000 000000 000000 000000 000000
00100: SAME: TO 000200-1

*T RECORD 778 (%1412, #30A)
00000: 036000 060156 122443 000134 000000 000445 017002 013467
00010: 000000 000447 000000 017000 031460 015441 140040 005000
00020: 000000 001700 001000 000440 017300 031466 000000 000000
00030: 000440 017170 031460 000000 000000 000040 011000 033760
00040: 000000 000407 000000 011000 017750 034001 015457 033760
00050: 000000 000000 000406 011000 033760 000000 000000 000405
00060: 007000 031760 030002 000440 000000 017700 031760 133771
00070: 000440 017340 000000 033760 000000 000000 000000 000000
00100: SAME: TO 000200-1

*T RECORD 779 (%1413, #30B)
00000: 036000 060156 113735 000212 000000 000000 000502 017000
00010: 031562 000200 000000 000440 017070 031460 000000 014040
00020: 000000 017460 031460 000000 000440 017340 000000 031760
00030: 030000 014440 017760 031460 000000 000000 000040 017140
00040: 033760 000000 000000 000501 017000 041561 000017 014440
00050: 000000 017570 033760 020000 000442 017140 000000 001562
00060: 000000 000500 017700 001736 000000 034001 015475 031460
00070: 000000 000040 000000 017140 000000 000000 000000 000000
00100: SAME: TO 000200-1

*T RECORD 780 (%1414, #30C)
```

201

```
00000: 036000 060156 104507 000270 000000 033760 000000 000502
00010: 017140 041561 000000 177400 002440 017304 043561 000360
00020: 000000 000441 017000 033760 015522 020503 000000 005000
00030: 111561 000020 000440 017000 000000 031460 015600 020040
00040: 005000 111561 000000 000040 000440 017000 031460 015606
00050: 000000 020040 005000 111561 000060 000440 000000 017000
00060: 031460 015614 020040 005000 000000 111561 000100 000440
00070: 017000 031460 000000 015635 000000 000000 000000 000000
00100: SAME: TO 000200-1
```

*T RECORD 781 (%1415, #30D)
```
00000: 036000 060156 152540 000346 000000 020040 005000 111561
00010: 000120 000440 000000 017000 071017 034001 015513 031460
00020: 000000 015630 020040 005000 111561 000140 000000 000440
00030: 017000 031460 015623 020040 000000 005000 111561 000160
00040: 000440 017000 000000 031460 015642 020040 005000 111561
00050: 000000 000200 000440 017000 015661 015532 000000 020040
00060: 001000 011462 000000 000440 000000 017300 031460 000000
00070: 054040 017460 000000 013463 000000 000000 000000 000000
00100: SAME: TO 000200-1
```

*T RECORD 782 (%1416, #30E)
```
00000: 036000 060156 114530 000424 000000 000000 000443 017140
00010: 031460 015524 000000 140040 005000 031460 000000 000040
00020: 000000 017000 031460 000000 000040 017000 000000 031460
00030: 000000 034040 017400 051022 000000 034001 015531 031460
00040: 015661 000040 000000 016000 033462 000000 000444 017000
00050: 000000 031760 030000 000440 017700 031760 000000 000000
00060: 014440 017570 001563 000000 000000 000440 017340 033760
00070: 000000 000501 000000 017000 000000 000000 000000 000000
00100: SAME: TO 000200-1
```

*T RECORD 783 (%1417, #30F)
```
00000: 036000 060156 143151 000502 000000 001561 020000 000440
00010: 017700 001564 000000 000000 000440 017300 031460 015570
00020: 000000 000040 006000 031760 030000 000440 000000 017700
00030: 031760 000001 014440 017570 000000 001563 000001 000440
00040: 017340 033760 000000 000000 000501 017000 001561 020000
00050: 000000 000440 017700 135550 034001 015547 000000 001564
00060: 000001 000440 017300 031460 000000 015570 000040 006000
00070: 031760 030000 000000 000440 000000 000000 000000 000000
00100: SAME: TO 000200-1
```

*T RECORD 784 (%1420, #310)
```
00000: 036000 060156 051726 000560 000000 017700 031760 000002
00010: 014440 017570 000000 001563 000002 000440 017340 033760
00020: 000000 000000 000501 017000 001561 020000 000000 000440
00030: 017700 001564 000002 000440 000000 017300 031460 015570
00040: 000040 006000 000000 031760 030000 000440 017700 031760
00050: 000000 000003 014440 017570 001563 000003 000000 000440
00060: 017340 033760 000000 000501 000000 017000 001561 020000
00070: 000440 017700 000000 074106 000000 000000 000000 000000
00100: SAME: TO 000200-1
```

*T RECORD 785 (%1421, #311)
```
00000: 036000 060156 126512 000636 000000 034001 015565 001564
00010: 000003 000440 000000 017300 031460 015570 000040 006000
00020: 000000 031460 015661 000040 016000 031460 000000 000000
```

```
00030: 054040 017440 031760 000000 000000 000440 017030 031460
00040: 000000 000040 000000 017060 031460 000000 000040 017000
00050: 000000 031460 000000 000040 017000 031460 000000 000000
00060: 000040 017000 031460 000000 000000 034040 017400 031460
00070: 000000 000040 000000 007000 000000 000000 000000 000000
00100: SAME: TO 000200-1

*T RECORD 786 (%1422, #312)
00000: 036000 060156 041467 000714 000000 033760 000000 000521
00010: 017000 031462 000000 000000 000440 017030 121561 000000
00020: 000000 000540 017700 100571 034001 015603 000000 001561
00030: 000000 000540 017700 113161 000000 000000 014443 017460
00040: 015661 015603 000000 140040 001000 033760 000000 000521
00050: 000000 017000 121162 000000 000441 017030 000000 021760
00060: 000000 000540 017700 001561 000000 000000 000500 017030
00070: 013463 000000 000000 014443 000000 000000 000000 000000
00100: SAME: TO 000200-1

*T RECORD 787 (%1423, #313)
00000: 036000 060156 151140 000772 000000 017560 015661 015611
00010: 140040 001000 000000 033760 000000 000521 017000 013462
00020: 000000 000000 000442 017000 021760 000000 000000 000540
00030: 017700 103462 000000 000442 000000 017030 041561 000000
00040: 000500 017030 000000 126753 034001 015621 013463 000000
00050: 000000 014443 017560 015661 015617 140040 000000 001000
00060: 021760 000000 000540 017700 000000 041562 000700 000440
00070: 017035 103462 000000 000000 000000 000000 000000 000000
00100: SAME: TO 000200-1

*T RECORD 788 (%1424, #314)
00000: 036000 060156 102667 001050 000000 014442 017560 013463
00010: 000000 000443 000000 017000 015661 015624 140040 001000
00020: 000000 021760 000000 000540 017700 041562 000000 000070
00030: 003440 017036 103462 000000 000000 014442 017560 013463
00040: 000000 000443 000000 017000 015661 015631 140040 001000
00050: 000000 021760 000000 000540 017700 041562 000000 000007
00060: 002440 017037 043371 034001 000000 015637 103462 000000
00070: 014442 017560 000000 013463 000000 000000 000000 000000
00100: SAME: TO 000200-1

*T RECORD 789 (%1425, #315)
00000: 036000 060156 107500 001126 000000 000000 000443 017000
00010: 015661 015636 000000 140040 001000 031460 000000 000440
00020: 000000 017030 031460 000000 000100 015000 000000 003563
00030: 000003 000441 017000 113562 000000 000002 000440 017000
00040: 013463 000000 000000 000443 017000 011462 000000 000440
00050: 000000 017300 031460 000000 054040 017460 000000 013463
00060: 000000 000443 017140 031460 000000 015651 140040 005000
00070: 031460 000000 000000 000040 000000 000000 000000 000000
00100: SAME: TO 000200-1

*T RECORD 790 (%1426, #316)
00000: 036000 060156 025170 001204 000000 017000 031460 000000
00010: 000040 017000 000000 107142 034001 015655 031460 000000
00020: 000000 034040 017400 031460 005356 000040 000000 006000
00030: 031460 000000 000040 011000 000000 033760 015661 000400
00040: 016000 031760 000000 030002 000440 017700 031760 133771
00050: 000000 000440 017340 033760 000000 000502 000000 017000
```

```
00060: 051562 000200 014440 017470 000000 031460 000000 000040
00070: 007060 031760 000000 001000 000000 000000 000000 000000
00100: SAME: TO 000200-1

*T RECORD 791 (%1427, #317)
00000: 036000 060156 155642 001262 000000 000440 017300 041260
00010: 000000 000440 000000 017170 033760 030000 000440 017160
00020: 000000 031760 000145 000440 017360 031760 000000 000167
00030: 000440 017030 041577 034001 000000 015673 001560 000002
00040: 014440 017760 000000 031760 133771 000440 017360 031760
00050: 000000 000040 014440 017570 031460 000000 000000 000040
00060: 017160 041260 000000 014440 000000 017570 031460 000000
00070: 014040 017560 000000 041260 000000 000000 000000 000000
00100: SAME: TO 000200-1

*T RECORD 792 (%1430, #318)
00000: 036000 060156 015251 001340 000000 000000 014440 017570
00010: 031760 133775 000000 000440 017360 041260 000000 014440
00020: 000000 017570 033760 024000 000440 017000 000000 031460
00030: 000000 000440 017340 031760 000000 000000 000500 017000
00040: 031460 000000 000000 014040 007000 031460 015461 000040
00050: 000000 006000 162164 034001 015711 003560 000000 000005
00060: 000440 017000 031460 015705 000000 000040 016000 031760
00070: 000145 000440 000000 017340 000000 000000 000000 000000
00100: SAME: TO 000200-1

*T RECORD 793 (%1431, #319)
00000: 036000 060156 172747 001416 000000 033760 000000 000500
00010: 017000 031460 000000 000000 020040 007000 041560 010000
00020: 000000 000440 017000 031460 016105 120040 000000 006000
00030: 031760 000145 000440 017340 000000 033760 000000 000500
00040: 017000 043560 000000 000375 000441 017000 031460 015731
00050: 000000 020040 005000 041560 177400 000440 000000 017070
00060: 031460 000000 000040 037150 000000 101760 001000 000440
00070: 017340 027031 000000 034001 000000 000000 000000 000000
00100: SAME: TO 000200-1

*T RECORD 794 (%1432, #31A)
00000: 036000 060156 120641 001474 000000 015727 031561 000000
00010: 000500 017070 000000 031460 000000 000040 027170 041560
00020: 000000 000400 000440 017000 031460 015736 000000 120040
00030: 005000 033760 000000 000500 000000 017000 041560 001000
00040: 000440 017000 000000 016301 000000 020040 003000 031460
00050: 000000 000000 000040 037150 031460 000000 000000 000040
00060: 017040 033760 000000 000500 000000 017000 051560 000400
00070: 000440 017070 000000 101760 000000 000000 000000 000000
00100: SAME: TO 000200-1

*T RECORD 795 (%1433, #31B)
00000: 036000 060156 067310 001552 000000 001000 000440 017300
00010: 033760 100000 000000 000440 017140 031560 000000 000500
00020: 000000 017070 105057 034001 015745 031460 000000 000000
00030: 000040 037170 031760 000142 000000 000440 017340 033760
00040: 000000 000501 000000 017000 003740 000000 014445 017000
00050: 000000 043260 000000 000440 017000 033461 000000 000000
00060: 000442 017000 043160 000000 000000 000442 017000 041562
00070: 000014 000440 000000 017000 000000 000000 000000 000000
00100: SAME: TO 000200-1
```

```
*T RECORD 796 (%1434, #31C)
00000: 036000 060156 166315 001630 000000 031460 015757 020040
00010: 005000 043562 000000 000014 000442 017000 043260 000000
00020: 000000 000443 017000 103760 000000 000444 000000 017000
00030: 031462 000000 000440 017000 000000 031460 015770 020040
00040: 005000 132350 000000 034001 015763 031460 015765 144040
00050: 000000 005000 033464 000000 000443 017000 000000 035462
00060: 000000 000442 017002 103464 000000 000000 000444 017000
00070: 031460 015761 000000 000040 000000 000000 000000 000000
00100: SAME: TO 000200-1

*T RECORD 797 (%1435, #31D)
00000: 036000 060156 070726 001706 000000 016000 033760 000400
00010: 000444 017000 000000 031463 000000 000440 017000 003740
00020: 000000 000000 120442 017000 041160 000000 000000 000444
00030: 017000 031460 015776 121040 000000 005000 033165 000000
00040: 000442 017000 000000 001560 031400 000440 017300 001162
00050: 000000 000000 000442 017070 031460 016022 000000 050040
00060: 005000 042336 034001 016001 000000 001563 133777 000440
00070: 017340 033760 000000 000000 000000 000000 000000 000000
00100: SAME: TO 000200-1

*T RECORD 798 (%1436, #31E)
00000: 036000 060156 077270 001764 000000 000502 017000 041260
00010: 000000 000440 000000 017030 041562 000001 000440 017000
00020: 000000 031460 016007 020040 005000 031760 000000 000377
00030: 000440 017030 001560 027000 000000 000440 017360 041260
00040: 000000 000440 000000 017030 041562 000002 000440 017000
00050: 000000 031460 016014 020040 005000 031760 000000 000377
00060: 000440 017030 001564 000000 000000 000520 017360 041260
00070: 000000 000440 000000 017030 000000 000000 000000 000000
00100: SAME: TO 000200-1

*T RECORD 799 (%1437, #31F)
00000: 036000 060156 114103 002042 000000 041562 000004 000440
00010: 017000 126117 000000 034001 016017 031460 016021 020040
00020: 000000 005000 031760 000377 000440 017030 000000 001564
00030: 000000 000520 017360 103460 000000 000000 000440 017000
00040: 111560 001000 000000 000440 017000 031460 015752 014040
00050: 000000 005000 031460 000000 000040 037150 000000 101760
00060: 001000 000440 017340 033760 000000 070000 000440 017000
00070: 031560 000000 000000 000500 000000 000000 000000 000000
00100: SAME: TO 000200-1

*T RECORD 800 (%1440, #320)
00000: 036000 060156 166223 002120 000000 017070 033760 000020
00010: 000440 017140 000000 031560 000000 000500 017070 031460
00020: 000000 000000 000040 037170 031760 030006 000000 000440
00030: 017700 126013 034001 016035 000000 031760 101365 000440
00040: 017340 033760 000000 000000 000500 017000 041560 000017
00050: 000000 014440 017470 031760 000144 000440 000000 017340
00060: 033760 030000 000443 017000 000000 033760 000000 000502
00070: 017000 031760 000000 133771 000000 000000 000000 000000
00100: SAME: TO 000200-1

*T RECORD 801 (%1441, #321)
00000: 036000 060156 071164 002176 000000 045440 017340 033760
```

```
00010: 000000 000501 000000 017000 053561 000006 000441 017000
00020: 000000 043562 000006 000442 017000 035462 000000 000000
00030: 000444 017002 031161 000000 000000 000442 017070 001563
00040: 000002 014440 000000 017760 031760 133772 000440 017340
00050: 000000 073600 034001 016053 033760 000000 000000 000502
00060: 017000 033562 000060 000442 000000 017000 031460 016057
00070: 050040 005000 000000 053562 000000 000000 000000 000000
00100: SAME: TO 000200-1


*T RECORD 802 (%1442, #322)
00000: 036000 060156 016260 002254 000000 000060 000442 017000
00010: 031562 000040 000000 000440 017070 001563 000003 014440
00020: 000000 017760 031460 000000 000040 007000 000000 031460
00030: 025732 000040 006000 031760 000000 000142 000440 017300
00040: 031760 000374 000000 000440 017070 033760 134010 000440
00050: 000000 017000 033760 133777 000441 017000 000000 033760
00060: 000011 000442 017000 031460 000000 000000 000440 017340
00070: 113467 034001 000000 016071 000000 000000 000000 000000
00100: SAME: TO 000200-1


*T RECORD 803 (%1443, #323)
00000: 036000 060156 153107 002332 000000 103460 000000 000440
00010: 017000 031461 000000 000000 000440 017360 103461 000000
00020: 000000 000441 017000 013462 000000 000442 000000 017000
00030: 031460 016070 140040 005000 000000 031460 000000 000040
00040: 037150 031760 000000 000145 000440 017340 033760 000400
00050: 000000 000440 017000 031560 000000 000500 000000 017070
00060: 031460 000000 000040 037170 000000 031460 025763 000040
00070: 006000 031460 000000 000000 000000 000000 000000 000000
00100: SAME: TO 000200-1


*T RECORD 804 (%1444, #324)
00000: 036000 060156 050360 002410 000000 000040 007000 031460
00010: 000000 000040 000000 037150 031460 000000 000040 017040
00020: 000000 057200 034001 016107 033760 000000 000000 000500
00030: 017000 051560 010000 000440 000000 017070 033760 000125
00040: 005441 037170 000000 033760 000252 000442 017000 031760
00050: 000000 145704 000440 017340 033760 000040 000000 000443
00060: 017000 033760 000000 000500 000000 017000 111560 000001
00070: 000440 017000 000000 031460 000000 000000 000000 000000
00100: SAME: TO 000200-1


*T RECORD 805 (%1445, #325)
00000: 036000 060156 106322 002466 000000 016143 020040 005000
00010: 043260 000000 000000 000441 017000 033760 000125 000442
00020: 000000 017000 033760 000040 000443 017000 000000 111560
00030: 000003 000440 017000 031460 000000 016143 020040 005000
00040: 005345 034001 000000 016125 033760 000500 000443 017000
00050: 000000 111560 000004 000440 017000 031460 000000 016143
00060: 020040 005000 033462 000000 000000 000441 017000 043260
00070: 000000 000442 000000 017000 000000 000000 000000 000000
00100: SAME: TO 000200-1


*T RECORD 806 (%1446, #326)
00000: 036000 060156 056604 002544 000000 111560 000005 000440
00010: 017000 031460 000000 016143 020040 005000 033760 000100
00020: 000000 000443 017000 033461 000000 000442 000000 017000
00030: 043260 000000 000441 017000 000000 111560 000002 000440
```

206

```
00040: 017000 031460 000000 016143 120040 005000 033760 000252
00050: 000000 001441 017000 033760 000377 000442 000000 017000
00060: 175344 034001 016143 043260 000000 000000 000440 017000
00070: 033463 016163 000000 050444 000000 000000 000000 000000
00100: SAME: TO 000200-1


*T RECORD 807 (%1447, #327)
00000: 036000 060156 147143 002622 000000 005000 031461 000000
00010: 000440 017030 000000 043160 000000 000444 017000 121164
00020: 000000 000000 000443 017000 031460 016152 000000 120040
00030: 005000 031462 000000 000440 000000 017030 001560 030400
00040: 000440 017360 000000 103460 000000 000440 017000 111560
00050: 000000 000777 000440 017000 031460 016144 000000 040040
00060: 005000 031460 000000 000040 000000 037150 101760 001000
00070: 000440 017340 000000 033760 000000 000000 000000 000000
00100: SAME: TO 000200-1


*T RECORD 808 (%1450, #328)
00000: 036000 060156 176532 002700 000000 000002 000440 017000
00010: 127202 034001 000000 016161 031560 000000 000500 017070
00020: 000000 031460 000000 000040 027170 043560 000000 000077
00030: 000445 017000 111565 000076 000000 000440 017000 031460
00040: 016171 114040 000000 005000 031760 133756 000440 017340
00050: 000000 121565 000000 000500 017000 031461 000000 016152
00060: 014440 005030 031760 146160 000000 000440 017340 031760
00070: 000000 000500 000000 017000 000000 000000 000000 000000
00100: SAME: TO 000200-1


*T RECORD 809 (%1451, #329)
00000: 036000 060156 156135 002756 000000 031461 016152 120440
00010: 005030 031760 000000 133762 000440 017340 033760 000000
00020: 000000 000505 017000 001565 133763 000440 000000 017340
00030: 145331 034001 016177 031460 000000 016262 000040 006000
00040: 031460 016152 000000 000040 016000 031760 133757 000440
00050: 000000 017340 041560 000000 000500 017000 000000 031461
00060: 000000 000040 017030 031460 000000 000000 020040 007000
00070: 031462 000000 000000 000440 000000 000000 000000 000000
00100: SAME: TO 000200-1


*T RECORD 810 (%1452, #32A)
00000: 036000 060156 017247 003034 000000 007030 033462 000000
00010: 000445 017000 000000 031760 133757 000440 017340 041560
00020: 000000 000000 000500 017000 031460 016224 000000 120040
00030: 005000 033760 017577 000444 000000 017140 031760 000000
00040: 000500 017000 000000 043160 016217 020444 005000 057375
00050: 000000 034001 016215 041560 000200 000440 000000 017000
00060: 031460 016223 020040 005000 000000 111564 000000 000500
00070: 017000 031460 000000 016223 000000 000000 000000 000000
00100: SAME: TO 000200-1


*T RECORD 811 (%1453, #32B)
00000: 036000 060156 113105 003112 000000 014040 005140 111564
00010: 000000 000500 000000 017000 031460 016224 040040 005000
00020: 000000 033461 000000 000445 017000 031465 000000 000000
00030: 000440 007030 033461 000000 000000 000445 017000 031760
00040: 133757 000440 000000 017340 033760 000000 000506 017140
00050: 000000 033566 000000 000506 017000 121160 000000 000000
00060: 000446 017000 031460 016234 000000 120040 005000 147733
```

```
00070: 034001 016233 000000 033462 000000 000000 000000 000000
00100: SAME: TO 000200-1


*T RECORD 812 (%1454, #32C)
00000: 036000 060156 152532 003170 000000 000000 000445 017000
00010: 031465 000000 000000 000440 007030 031462 000000 000440
00020: 000000 017030 041560 000100 000440 017000 000000 031460
00030: 000000 120040 007000 041560 000000 000200 000440 017000
00040: 031760 000125 000000 000040 017030 031460 000000 120040
00050: 000000 007000 031461 000000 000440 007030 000000 033760
00060: 000352 000442 017000 031760 000000 133760 000440 017340
00070: 033760 000000 000000 000506 000000 000000 000000 000000
00100: SAME: TO 000200-1


*T RECORD 813 (%1455, #32D)
00000: 036000 060156 162443 003246 000000 017140 033760 000000
00010: 000507 017000 000000 031461 000000 000440 017030 105101
00020: 000000 034001 016251 041560 000400 000440 000000 017000
00030: 031460 000000 020040 007000 000000 043560 000077 000444
00040: 017000 121164 000000 000000 000446 017000 031460 000000
00050: 000000 014040 007000 121167 000000 000444 000000 017000
00060: 031460 000000 014040 007000 000000 031462 000000 000440
00070: 007030 031462 000000 000000 000000 000000 000000 000000
00100: SAME: TO 000200-1


*T RECORD 814 (%1456, #32E)
00000: 036000 060156 012277 003324 000000 000440 007030 031460
00010: 000000 000100 000000 015000 031460 000000 000040 007000
00020: 000000 101460 000000 000440 017340 033760 000000 000000
00030: 000501 017140 033760 000000 000000 000502 017140 162030
00040: 024001 016267 000000 033760 000000 000503 017140 033760
00050: 000000 000000 000504 017140 031760 133762 000000 000440
00060: 017360 031464 000000 000440 000000 017270 031463 000000
00070: 000440 017270 000000 031462 000000 000000 000000 000000
00100: SAME: TO 000200-1


*T RECORD 815 (%1457, #32F)
00000: 036000 060156 002666 003402 000000 000000 000440 017270
00010: 031461 000000 000000 000440 017270 031760 000145 000440
00020: 000000 017300 031460 016105 000040 006000 000000 031460
00030: 000000 000040 007000 012424 000000 005400 133756 000000
00040: 000100 000000 000000 000000 000000 016201 016206 016225
00050: 000000 016235 016244 016261 061674 034001 000000 016301
00060: 031460 000000 000040 037150 000000 031760 000145 000440
00070: 017340 033760 000000 000000 000000 000000 000000 000000
00100: SAME: TO 000200-1


*T RECORD 816 (%1460, #330)
00000: 036000 060156 153516 003460 000000 000500 017000 051560
00010: 001000 000440 000000 017070 031460 000000 000040 037170
00020: 000000 031460 016105 000040 016000 031760 000000 000141
00030: 000440 017340 033760 000000 000000 000500 017000 101760
00040: 030000 000440 000000 017700 031760 133771 000440 017340
00050: 000000 033760 000000 000501 017000 031561 000000 000200
00060: 000440 017070 033760 000003 000000 014441 017560 033760
00070: 000001 000442 000000 017000 000000 000000 000000 000000
00100: SAME: TO 000200-1
```

```
*T RECORD 817 (%1461, #331)
00000: 036000 060156 055372 003536 000000 105156 034001 016317
00010: 031760 030000 000000 000440 017700 031461 000000 014440
00020: 000000 017470 031760 000011 014440 017570 000000 041160
00030: 000000 000442 017000 041260 000000 000000 000040 017030
00040: 031460 016326 000000 020040 005000 031760 000377 000440
00050: 000000 017030 031760 020000 014440 017760 000000 103461
00060: 000000 000441 017000 037462 000000 000000 000442 017002
00070: 111561 000006 000000 000440 000000 000000 000000 000000
00100: SAME: TO 000200-1

*T RECORD 818 (%1462, #332)
00000: 036000 060156 152053 003614 000000 017000 031460 016317
00010: 014040 005000 000000 101760 001000 000440 017300 051566
00020: 000000 100000 000440 017170 054674 012001 000000 016335
00030: 031760 133771 000440 017340 000000 033760 000000 000501
00040: 017000 051561 000000 000200 000440 017070 031760 030002
00050: 000000 014440 017760 031460 015455 000040 000000 016000
00060: 175277 024000 133771 000000 000000 000000 000000 000000
00070: SAME: TO 000200-1

*T RECORD 819 (%1463, #333)
00000: 036000 060156 045303 003672 000000 000000 000007 000000
00010: 000007 000004 000000 000003 000005 000006 000000 000000
00020: 000000 000007 000000 000007 000004 000003 000000 000005
00030: 000006 025000 025400 025400 000000 026000 026000 026400
00040: 026400 027000 000000 000001 000000 000004 000000 000020
00050: 000000 000000 000100 000000 014216 003000 000000 000140
00060: 000000 000000 000374 000140 000000 000000 000000 000674
00070: 034000 024000 000000 000000 000000 000000 000000 000000
00100: SAME: TO 000200-1

*T RECORD 820 (%1464, #334)
00000: 036000 060156 141312 003750 000000 000420 000000 000000
00010: 002000 000000 000000 000421 000000 000125 001774 000000
00020: 000000 000422 000000 000000 002000 000001 000000 000440
00030: 000000 000000 002000 000001 000000 000441 000000 000000
00040: 002000 000001 000000 000442 000000 000000 002000 000001
00050: 000000 000443 000000 000000 002000 000001 000000 010040
00060: 001000 000000 000400 000001 000000 010041 001000 000000
00070: 000400 000001 000000 010042 000000 000000 000000 000000
00100: SAME: TO 000200-1

*T RECORD 821 (%1465, #335)
00000: 036000 060156 055141 004026 000000 001000 000000 000400
00010: 000001 010043 000000 001000 000000 000400 000001 114231
00020: 000000 034000 024070 170060 001400 000000 000000 000400
00030: 000001 170061 001400 000000 000000 000400 000001 170062
00040: 001400 000000 000000 000400 000001 170063 001400 000000
00050: 000000 000400 000000 000421 001000 000252 000000 000100
00060: 000000 000421 001100 000377 000000 000300 000003 000420
00070: 000000 000000 000000 004000 000000 000000 000000 000000
00100: SAME: TO 000200-1

*T RECORD 822 (%1466, #336)
00000: 036000 060156 011025 004104 000000 000003 000421 000000
00010: 000000 004000 000000 000003 000422 000000 000000 004000
00020: 000000 000003 000103 000000 000000 001000 000000 000003
```

```
00030: 000424 000000 000000 001000 000000 000003 000425 021675
00040: 034000 024160 000000 000000 000000 001000 000003 000426
00050: 000000 000000 000000 001000 000003 000447 000000 000000
00060: 000000 000400 000003 000447 000000 001000 000000 000400
00070: 000003 000450 000000 000000 000000 000000 000000 000000
00100: SAME: TO 000200-1

*T RECORD 823 (%1467, #337)
00000: 036000 060156 045702 004162 000000 000000 000400 000003
00010: 000440 000000 000000 000000 000040 000004 000420 000000
00020: 000000 000000 004000 000004 000421 000000 000000 000000
00030: 004000 000004 000422 000000 000000 000000 004000 000004
00040: 000123 000000 000000 000000 001000 000004 000424 000000
00050: 000000 000000 001000 000004 000425 000000 000000 054422
00060: 034000 024250 000000 001000 000000 000004 000426 000000
00070: 000000 001000 000000 000004 000000 000000 000000 000000
00100: SAME: TO 000200-1

*T RECORD 824 (%1470, #338)
00000: 036000 060156 112656 004240 000000 000447 000000 000000
00010: 001000 000004 000000 000447 001000 000000 000400 000004
00020: 000000 000450 000000 000000 000400 000004 000000 000441
00030: 000000 000000 000040 000005 000000 000420 000000 000000
00040: 004000 000005 000000 000421 000000 000000 004000 000005
00050: 000000 000422 000000 000000 004000 000005 000000 000143
00060: 000000 000000 001000 000005 000000 000424 000000 000000
00070: 001000 000005 000000 000425 000000 000000 000000 000000
00100: SAME: TO 000200-1

*T RECORD 825 (%1471, #339)
00000: 036000 060156 137154 004316 000000 000000 000000 055146
00010: 034000 024340 000000 001000 000005 000426 000000 000000
00020: 000000 001000 000005 000447 000000 000000 000000 000400
00030: 000005 000447 001000 000000 000000 000400 000005 000450
00040: 000000 000000 000000 000400 000005 000442 000000 000000
00050: 000000 000040 177777 000001 000000 000400 000000 025000
00060: 000400 000000 000001 000000 000000 030400 001000 000001
00070: 000001 000400 000000 025400 000000 000000 000000 000000
00100: SAME: TO 000200-1

*T RECORD 826 (%1472, #33A)
00000: 036000 060156 033063 004374 000000 000400 000001 000421
00010: 000400 000000 000000 000400 000001 000002 000400 026000
00020: 000000 000400 000001 000422 000400 000000 000000 173362
00030: 034000 024430 000400 000001 000000 000003 000400 026400
00040: 000400 000001 000000 000423 000400 000000 000400 000001
00050: 000000 000423 001000 000000 000400 000001 000000 000423
00060: 001400 000377 000400 000001 000000 010043 001000 000000
00070: 000400 000001 000000 170063 000000 000000 000000 000000
00100: SAME: TO 000200-1

*T RECORD 827 (%1473, #33B)
00000: 036000 060156 006425 004452 000000 001400 000000 000400
00010: 000003 000007 000000 000400 027000 000400 000004 000007
00020: 000000 000400 027400 000400 000005 000007 000000 000400
00030: 030000 000400 000000 000000 000000 000000 000000 000000
00040: 000003 000007 000000 001000 025000 000400 026732 024000
00050: 000000 024520 000004 000007 001000 025400 000000 000400
```

```
00060:  000005 000007 001000 026000 000000 000400 000001 000420
00070:  000400 000000 000000 000400 000000 000000 000000 000000
00100:  SAME: TO 000200-1


*T RECORD 828 (%1474, #33C)
00000:  022000 060132 162632 004530 000000 000000 000000 000000
00010:  031400 002000 000000 000000 000002 000000 032400 000400
00020:  000000 000001 000420 001000 000000 000400 000000 000001
00030:  000421 001000 000000 000400 000000 000001 000422 001000
00040:  000000 000400 000000 001260 000000 000000 000000 000000
00050:  SAME: TO 000200-1


*T RECORD 829 (%1475, #33D)
00000:  002000 120000 120000 000000 000000 000000 000000 000000
00010:  SAME: TO 000200-1


*T RECORD 830 (%1476, #33E)
00000:  025000 020000 011077 077115 053120 055040 007721 000000
00010:  SAME: TO 000020-1
00020:  000000 020115 047526 042454 050101 047054 055117 047515
00030:  020074 034066 030062 030062 027061 032464 034476 020040
00040:  SAME: TO 000050-1
00050:  020040 020040 000000 000000 000000 000000 000000 000000
00060:  SAME: TO 000200-1


*T RECORD 831 (%1477, #33F)
00000:  003400 040001 067236 077115 053120 055000 000000 000000
00010:  SAME: TO 000200-1


*T RECORD 832 (%1500, #340)
00000:  036000 060156 051544 000000 000000 007720 027400 134043
00010:  134053 134045 000000 134061 134204 134452 134327 134452
00020:  000000 134452 134126 134251 134517 134374 000000 134517
00030:  134517 004000 000000 001000 000000 000000 001000 000001
00040:  000100 010000 000000 000001 000000 000000 000000 001000
00050:  000000 000000 001000 001000 000000 000000 000000 000000
00060:  001000 000000 001000 001000 000000 134176 000001 000000
00070:  SAME: TO 000200-1


*T RECORD 833 (%1501, #341)
00000:  036000 060156 036061 000056 000000 000000 000000 000000
00010:  000001 132047 000000 020400 134126 002000 000000 000600
00020:  000000 000000 000600 000001 001000 010000 000000 000000
00030:  000000 000000 000000 001000 000000 000000 000000 000600
00040:  000000 000000 000000 000000 000600 000000 000600 000600
00050:  000000 134200 000001 000000 000000 000000 000000 000000
00060:  000000 000000 000000 000001 000000 110731 025000 134173
00070:  000000 000000 000000 000100 000000 000000 000000 000000
00100:  SAME: TO 000200-1


*T RECORD 834 (%1502, #342)
00000:  036000 060156 117376 000134 000000 000000 000040 000000
00010:  000600 000021 000000 000000 004000 000000 001000 000000
00020:  000000 001000 000002 000200 000040 000002 000000 000000
00030:  000000 000000 001000 000000 000000 001000 001000 000000
00040:  000000 000000 000000 001000 000000 001000 001000 134321
00050:  000000 000001 000000 000000 000000 000000 000000 000000
00060:  000000 000000 000001 105743 000000 020400 134251 002000
```

211

```
00070: 000000 000600 000000 000000 000000 000000 000000 000000
00100: SAME: TO 000200-1

*T RECORD 835 (%1503, #343)
00000: 036000 060156 123316 000212 000000 000600 000002 000400
00010: 004000 000000 000000 000000 000000 000000 001000 000000
00020: 000000 000000 000600 000000 000000 000000 000000 000600
00030: 000000 000600 000600 134323 000000 000001 000000 000000
00040: 000000 000000 000000 000000 000000 000000 000001 104600
00050: 000000 025000 134316 000000 000000 000200 000000 000000
00060: 000040 000000 000600 000021 000000 000000 004000 000000
00070: 001000 000000 000000 001000 000000 000000 000000 000000
00100: SAME: TO 000200-1

*T RECORD 836 (%1504, #344)
00000: 036000 060156 127025 000270 000000 000010 001000 004000
00010: 000010 000000 000000 000000 000000 001000 000000 001000
00020: 000000 001000 000000 000000 000000 001000 000000 000000
00030: 001000 001000 134444 000001 000000 000000 000000 000000
00040: 000000 000000 000000 000000 000000 000001 113065 020400
00050: 000000 134374 002000 000000 000600 000000 000000 000600
00060: 000010 000200 002000 000000 000000 000000 000000 000000
00070: 001000 000000 000000 000000 000000 000000 000000 000000
00100: SAME: TO 000200-1

*T RECORD 837 (%1505, #345)
00000: 036000 060156 132016 000346 000000 000600 000000 000000
00010: 000000 000600 000000 000000 000600 000600 134446 000001
00020: 000000 000000 000000 000000 000000 000000 000000 000000
00030: 000000 000001 102654 025000 000000 134441 000000 000000
00040: 001000 000000 000000 000040 000000 000600 000021 000000
00050: 000000 004000 000000 001000 000000 001000 000000 000024
00060: 002400 010000 000000 000000 000000 000000 000000 001000
00070: 000000 001000 000000 001000 000000 000000 000000 000000
00100: SAME: TO 000200-1

*T RECORD 838 (%1506, #346)
00000: 036000 060156 074467 000424 000000 000000 000000 000000
00010: 001000 000000 000000 001000 001000 134567 000001 000000
00020: SAME: TO 000030-1
00030: 000001 121537 020400 134517 000000 002000 000000 000600
00040: 000000 000600 000000 000024 001000 010000 000000 000000
00050: 000000 000000 000000 001000 000000 000000 000000 000600
00060: 000000 000000 000000 000600 000000 000000 000600 000600
00070: 134571 000001 000000 000000 000000 000000 000000 000000
00100: SAME: TO 000200-1

*T RECORD 839 (%1507, #347)
00000: 036000 060156 010774 000502 000000 000000 000000 000000
00010: 000000 000000 000000 000000 000001 111736 013400 134564
00020: 000000 000000 000000 002400 000000 000040 000000 000000
00030: 000600 000021 000000 000401 000000 002004 000004 001004
00040: 002000 001403 000000 001000 002002 000002 001002 017203
00050: 000000 017206 017205 017203 050114 034001 000000 016342
00060: 031460 025732 000040 006000 000000 031460 000000 000060
00070: 035070 033460 000000 000000 000000 000000 000000 000000
00100: SAME: TO 000200-1
```

212

```
*T RECORD 840 (%1510, #348)
00000: 036000 060156 033376 000560 000000 000442 017000 031760
00010: 001007 000440 000000 017340 031760 000000 000500 017000
00020: 000000 031460 016353 020040 005000 101760 000000 000000
00030: 000440 017030 031760 145607 000000 000440 017360 031460
00040: 016356 000040 000000 016000 033760 000002 000440 017000
00050: 000000 001560 104516 000440 017340 031460 000000 000000
00060: 000100 037330 033462 000000 000000 000440 017000 073760
00070: 000063 000442 000000 017000 000000 000000 000000 000000
00100: SAME: TO 000200-1

*T RECORD 841 (%1511, #349)
00000: 036000 060156 040440 000636 000000 000764 034001 016360
00010: 031460 017421 000000 000040 006000 031760 145647 000440
00020: 000000 017300 031760 000000 000440 017070 000000 031760
00030: 016376 000440 017030 031460 000000 017765 000040 006000
00040: 031760 016407 000000 000440 017030 031460 017774 000040
00050: 000000 006000 033760 000063 000442 017000 000000 031460
00060: 017425 000040 006000 041260 000000 000000 000440 017030
00070: 031760 145607 000000 000440 000000 000000 000000 000000
00100: SAME: TO 000200-1

*T RECORD 842 (%1512, #34A)
00000: 036000 060156 115217 000714 000000 017360 031460 000000
00010: 000040 011000 000000 031460 025763 000000 026360 031460
00020: 000000 000000 000040 007000 153302 034001 000000 016376
00030: 031460 016417 000040 006000 000000 031460 016456 000040
00040: 006000 031460 000000 016570 000040 006000 031460 016722
00050: 000000 000040 006000 031460 016713 000040 000000 006000
00060: 031460 016603 000040 006000 000000 031460 016730 000040
00070: 006000 031460 000000 016744 000000 000000 000000 000000
00100: SAME: TO 000200-1

*T RECORD 843 (%1513, #34B)
00000: 036000 060156 036330 000772 000000 000040 006000 031460
00010: 000000 000040 000000 007000 031460 016417 000040 006000
00020: 000000 031460 016456 000040 006000 031460 000000 016570
00030: 000040 006000 031460 016722 000000 000040 006000 031460
00040: 016713 000040 000000 006000 012501 034001 016414 031460
00050: 000000 016603 000040 006000 031460 016736 000000 000040
00060: 006000 031460 000000 000040 000000 007000 001560 000037
00070: 000440 017340 000000 031760 000000 000000 000000 000000
00100: SAME: TO 000200-1

*T RECORD 844 (%1514, #34C)
00000: 036000 060156 165361 001050 000000 000000 000500 017000
00010: 031460 016444 000000 120040 005000 001560 000046 000440
00020: 000000 017340 031460 016425 150040 005000 000000 001560
00030: 000113 000440 017340 033760 000000 134575 000441 017000
00040: 001561 000000 000000 000500 017340 033760 016431 152502
00050: 000000 005034 033760 000000 000502 017000 000000 043562
00060: 000077 000442 017000 020721 000000 034001 016432 013462
00070: 016446 020442 000000 005000 000000 000000 000000 000000
00100: SAME: TO 000200-1

*T RECORD 845 (%1515, #34D)
00000: 036000 060156 067462 001126 000000 013462 016451 020442
00010: 005000 013462 000000 016454 020442 005000 001560 000014
```

213

```
00020: 000000 022440 017340 033760 016440 154501 000000 005000
00030: 035461 000000 000441 017002 000000 001560 000013 000440
00040: 017340 001561 000000 000000 000500 017030 001560 000033
00050: 000000 000440 017360 031460 000000 000040 000000 007000
00060: 041260 000000 000440 017030 000000 001560 000011 000440
00070: 017360 041260 000000 000000 000000 000000 000000 000000
00100: SAME: TO 000200-1

*T RECORD 846 (%1516, #34E)
00000: 036000 060156 116223 001204 000000 000440 017030 001560
00010: 000034 000440 000000 017360 145726 034001 016450 031460
00020: 000000 000000 000040 007160 003700 000002 000000 000441
00030: 017000 001561 134721 000440 000000 017340 031460 016442
00040: 000040 016000 000000 001560 000013 000440 017340 031460
00050: 000000 016442 000040 016000 001560 000034 000000 000440
00060: 017340 033760 000000 000504 000000 017140 033760 000000
00070: 122507 017000 000000 016463 000000 000000 000000 000000
00100: SAME: TO 000200-1

*T RECORD 847 (%1517, #34F)
00000: 036000 060156 122010 001262 000000 016463 120042 001000
00010: 031460 000000 000000 000040 007000 041260 000000 000440
00020: 000000 017070 003700 000000 000450 017260 000000 001560
00030: 000040 000440 017360 120333 000000 034001 016466 001560
00040: 000030 000440 000000 017340 033760 000000 000506 017140
00050: 000000 033466 000000 000442 017000 033760 000000 000000
00060: 000503 017000 003567 000000 000000 000507 017000 003144
00070: 000000 024446 000000 017000 000000 000000 000000 000000
00100: SAME: TO 000200-1

*T RECORD 848 (%1520, #350)
00000: 036000 060156 077776 001340 000000 031460 016505 014040
00010: 005000 031460 000000 016500 120040 005000 111567 100000
00020: 000000 000440 017000 016507 016505 014040 000000 001000
00030: 111566 000100 000440 017000 000000 031460 016507 014040
00040: 005000 033760 000000 000077 000446 017000 033760 177777
00050: 000000 000447 017000 101147 034001 016504 000000 031460
00060: 016507 000040 016000 033760 000000 000000 000446 017000
00070: 033760 100000 000000 000447 000000 000000 000000 000000
00100: SAME: TO 000200-1

*T RECORD 849 (%1521, #351)
00000: 036000 060156 106144 001416 000000 017000 001560 000030
00010: 000440 017300 000000 031466 000000 000440 017070 031467
00020: 000000 000000 000440 017170 011466 000000 000000 000440
00030: 017000 031460 016517 014040 000000 005000 031460 016520
00040: 120040 005000 000000 031467 000000 000440 017000 031460
00050: 000000 016520 120040 005000 041260 016521 000000 000440
00060: 016030 031760 000040 000440 000000 017030 001560 000036
00070: 000440 017360 000000 060570 000000 000000 000000 000000
00100: SAME: TO 000200-1

*T RECORD 850 (%1522, #352)
00000: 036000 060156 106443 001474 000000 034001 016522 031460
00010: 025732 000040 000000 006000 001560 000013 000440 017340
00020: 000000 033760 000000 000501 017000 001560 000000 000033
00030: 000440 017340 113561 014744 000000 000500 006000 031460
00040: 000000 000440 000000 017030 031461 000000 000500 015030
```

```
00050: 000000 031460 000000 000100 015000 031460 000000 007760
00060: 004040 011000 033760 007761 000000 004400 011000 033760
00070: 014275 000401 000000 006000 000000 000000 000000 000000
00100: SAME: TO 000200-1


*T RECORD 851 (%1523, #353)
00000: 036000 060156 062402 001552 000000 031460 000000 000440
00010: 017030 031461 000000 000000 000500 015030 031460 000000
00020: 000000 000100 015000 157731 034001 016540 000000 031460
00030: 007762 004040 011000 033760 000000 007763 004400 011000
00040: 033760 014275 000000 000401 006000 031460 000000 000040
00050: 000000 011000 033760 000000 000403 011000 000000 033760
00060: 015140 000402 006000 033760 000000 040000 000442 017000
00070: 033760 000002 000000 000443 000000 000000 000000 000000
00100: SAME: TO 000200-1


*T RECORD 852 (%1524, #354)
00000: 036000 060156 122414 001630 000000 017000 031460 015027
00010: 000040 006000 000000 031460 000000 000040 011000 033760
00020: 000000 000000 000403 011000 033760 015112 000000 000402
00030: 006000 031460 014300 000040 000000 006000 031760 134041
00040: 000440 017300 000000 142726 034001 016556 031460 000000
00050: 000000 000440 017070 031461 025763 000440 000000 006170
00060: 031760 134041 000440 017340 000000 033760 000000 000505
00070: 017140 033760 000000 000000 000000 000000 000000 000000
00100: SAME: TO 000200-1


*T RECORD 853 (%1525, #355)
00000: 036000 060156 070214 001706 000000 000501 017000 001560
00010: 000011 000440 000000 017340 030760 000000 000500 017140
00020: 000000 001561 000000 000500 017070 001045 000000 000000
00030: 024440 017270 031460 000000 000000 000040 007000 033460
00040: 000000 000445 000000 017000 001565 000030 000440 017340
00050: 000000 033760 000000 000500 017140 030760 000000 000000
00060: 005500 017000 163552 034001 000000 016574 036460 000007
00070: 000640 017003 000000 001565 000000 000000 000000 000000
00100: SAME: TO 000200-1


*T RECORD 854 (%1526, #356)
00000: 036000 060156 155403 001764 000000 000023 000440 017340
00010: 030760 003435 000000 000500 006000 034461 000007 000641
00020: 000000 017003 031260 000000 000440 017030 000000 001565
00030: 000014 000440 017360 033465 000000 000000 000440 007000
00040: 001560 000013 000000 000440 017340 033760 000000 000502
00050: 000000 017000 031460 016607 114040 005000 000000 043260
00060: 000000 000442 017030 001560 000000 000015 000440 017360
00070: 001560 000014 000000 000440 000000 000000 000000 000000
00100: SAME: TO 000200-1


*T RECORD 855 (%1527, #357)
00000: 036000 060156 142417 002042 000000 017340 033760 000000
00010: 000501 017000 000000 065175 034001 016612 001560 000013
00020: 000000 000440 017340 003561 000000 000501 000000 017000
00030: 001560 000017 000440 017340 000000 111561 000000 000500
00040: 017000 031460 000000 016620 014040 005000 033760 000000
00050: 000000 000501 017000 121161 000000 000442 000000 017030
00060: 001560 000016 000440 017360 000000 033760 000000 000507
00070: 017000 001560 000000 000030 000000 000000 000000 000000
```

```
00100: SAME: TO 000200-1

*T RECORD 856 (%1530, #358)
00000: 036000 060156 020351 002120 000000 000440 017340 033760
00010: 000000 000506 000000 017140 030760 000000 000500 017000
00020: 000000 036466 000007 000646 017003 001560 000000 000013
00030: 000440 017340 110427 034001 000000 016630 043260 000000
00040: 000450 017000 000000 110760 000000 000500 017000 001560
00050: 000000 000022 000040 017340 033460 016700 000000 040445
00060: 005000 033760 000000 000515 000000 017000 001560 000030
00070: 000440 017340 000000 033760 000000 000000 000000 000000
00100: SAME: TO 000200-1

*T RECORD 857 (%1531, #359)
00000: 036000 060156 156022 002176 000000 000000 000500 017140
00010: 033760 000000 000000 000501 017000 013440 000000 120442
00020: 000000 017000 123260 000000 000457 017000 000000 043260
00030: 000000 000456 017000 001565 000000 000036 000440 017340
00040: 031760 000000 000000 000500 017000 031460 016664 020040
00050: 000000 005000 012203 034001 016646 033462 000000 000000
00060: 000450 017000 103475 000000 000000 000455 017000 103162
00070: 000000 000457 000000 017000 000000 000000 000000 000000
00100: SAME: TO 000200-1

*T RECORD 858 (%1532, #35A)
00000: 036000 060156 120260 002254 000000 003161 016655 114456
00010: 005000 013440 000000 000000 024442 017000 043260 016647
00020: 000000 040050 005000 033462 016647 000450 000000 016000
00030: 031477 000000 000440 017000 000000 031460 016661 120040
00040: 005000 031475 000000 000000 000440 017030 043260 016700
00050: 000000 000450 016000 011475 000000 000440 000000 017030
00060: 013477 000000 000457 017000 000000 113177 016700 000450
00070: 016000 060720 000000 034001 000000 000000 000000 000000
00100: SAME: TO 000200-1

*T RECORD 859 (%1533, #35B)
00000: 036000 060156 004136 002332 000000 016664 123461 000000
00010: 000450 017000 000000 033477 000000 021442 017000 113161
00020: 000000 000000 000450 017000 016672 016672 000000 124041
00030: 001000 113161 000000 000450 000000 017000 103476 000000
00040: 000456 017000 000000 103462 000000 000442 017000 031460
00050: 000000 016666 014040 005000 037476 000000 000000 000440
00060: 017002 111076 000000 000440 000000 017030 001560 000000
00070: 000500 017030 000000 001575 000000 000000 000000 000000
00100: SAME: TO 000200-1

*T RECORD 860 (%1534, #35C)
00000: 036000 060156 012017 002410 000000 000000 000500 017030
00010: 001565 000024 000000 000440 017360 001565 000032 000440
00020: 000000 017300 004566 034001 016702 031470 000000 000000
00030: 000440 017070 030467 000000 000000 000440 017000 043260
00040: 000000 000440 000000 017000 036460 000007 000640 017003
00050: 000000 033466 003325 000441 006000 031460 000000 000000
00060: 000440 017000 001441 000000 000000 120440 017030 001565
00070: 000025 000440 000000 017360 000000 000000 000000 000000
00100: SAME: TO 000200-1

*T RECORD 861 (%1535, #35D)
```

```
00000: 036000 060156 156660 002466 000000 033465 000000 000440
00010: 007000 001560 000000 000026 000440 017340 043260 000000
00020: 000000 000443 017000 033760 000000 000504 000000 017000
00030: 001560 000023 000440 017340 000000 030760 000020 000440
00040: 017000 121107 000000 034001 016720 113564 017431 000504
00050: 000000 006000 031460 000000 000040 007000 000000 001560
00060: 000014 000440 017340 113760 000000 000000 000503 017000
00070: 001560 000017 000000 000440 000000 000000 000000 000000
00100: SAME: TO 000200-1

*T RECORD 862 (%1536, #35E)
00000: 036000 060156 150341 002544 000000 017340 030760 000011
00010: 000440 017000 000000 033760 017431 000504 006000 031460
00020: 000000 000000 000040 007000 031460 017450 000000 000040
00030: 006000 031460 017323 000040 000000 006000 031460 017227
00040: 000040 006000 000000 031460 016776 002040 006000 031460
00050: 000000 017465 000040 006000 031460 000000 000000 000040
00060: 007000 031572 034001 016736 000000 031460 017450 000040
00070: 006000 031460 000000 017323 000000 000000 000000 000000
00100: SAME: TO 000200-1

*T RECORD 863 (%1537, #35F)
00000: 036000 060156 022324 002622 000000 000040 006000 031460
00010: 000000 006040 000000 017000 031460 016776 000040 006000
00020: 000000 031460 017504 000040 006000 031460 000000 000000
00030: 000040 007000 001560 000036 000000 000440 017340 033760
00040: 000000 000501 000000 017000 031760 145647 000440 017340
00050: 000000 031561 000000 000500 007070 041260 000000 000000
00060: 000440 017030 031760 134134 000000 000440 017360 031760
00070: 134257 000440 000000 017360 000000 000000 000000 000000
00100: SAME: TO 000200-1

*T RECORD 864 (%1540, #360)
00000: 036000 060156 133324 002700 000000 031760 134402 000440
00010: 017360 115057 000000 034001 016754 031760 134525 000440
00020: 000000 017360 031760 010000 000440 017030 000000 031760
00030: 134213 000440 017360 031760 000000 134336 000440 017360
00040: 031760 134260 000000 000440 017360 031760 134403 000440
00050: 000000 017360 031760 000064 000440 017030 000000 031760
00060: 134457 000440 017360 031760 000000 134524 000440 017360
00070: 031760 006400 000000 000440 000000 000000 000000 000000
00100: SAME: TO 000200-1

*T RECORD 865 (%1541, #361)
00000: 036000 060156 023371 002756 000000 017030 031760 134460
00010: 000440 017360 000000 031460 000000 000040 007000 031760
00020: 000000 001700 000440 017030 031760 134067 000000 000440
00030: 017360 040453 034001 016772 000000 031760 134212 000440
00040: 017360 031760 000000 134335 000440 017360 031760 134460
00050: 000000 000440 017360 031460 000000 000040 000000 007000
00060: 001560 000007 000440 017340 000000 033760 000000 000501
00070: 017000 073461 000000 000000 000000 000000 000000 000000
00100: SAME: TO 000200-1

*T RECORD 866 (%1542, #362)
00000: 036000 060156 125310 003034 000000 000442 017000 001560
00010: 000036 000440 000000 017340 031460 017004 054040 005000
00020: 000000 001560 177771 000440 017340 031760 000000 000000
```

217

```
00030: 000500 017000 001560 000030 000000 021440 017340 033760
00040: 000000 000504 000000 017140 033760 000000 000505 017000
00050: 000000 154250 034001 017010 001560 000032 000000 000040
00060: 017340 013544 000000 120503 000000 017000 001560 000016
00070: 000440 017340 000000 113760 000000 000000 000000 000000
00100: SAME: TO 000200-1

*T RECORD 867 (%1543, #363)
00000: 036000 060156 164776 003112 000000 000000 000510 017000
00010: 001560 000000 000000 000440 017340 033760 000000 000507
00020: 000000 017000 001560 000015 000440 017340 000000 003567
00030: 017104 054507 005000 001560 000000 000006 000440 017340
00040: 033760 000000 000000 000511 017000 073760 017024 050512
00050: 000000 005000 033171 017025 000441 016000 000000 043172
00060: 000000 000442 017000 001560 000000 000036 000440 017340
00070: 077753 034001 000000 017026 000000 000000 000000 000000
00100: SAME: TO 000200-1

*T RECORD 868 (%1544, #364)
00000: 036000 060156 056215 003170 000000 031760 000000 052500
00010: 017000 001740 000000 000000 021440 017030 001720 000000
00020: 000000 000500 017030 031467 000000 046440 000000 017300
00030: 031460 017062 050040 005000 000000 033465 000000 000446
00040: 017000 031460 000000 017156 120040 006000 031460 017050
00050: 000000 054040 005000 123463 000000 000447 000000 017040
00060: 031460 017043 114040 005000 000000 031561 000000 000500
00070: 017070 103467 000000 000000 000000 000000 000000 000000
00100: SAME: TO 000200-1

*T RECORD 869 (%1545, #365)
00000: 036000 060156 162023 003246 000000 000447 017140 031460
00010: 017040 120040 000000 005000 041562 000000 000500 017030
00020: 000000 110576 034001 017044 031571 000000 000000 000500
00030: 017070 103163 000000 000450 000000 017000 003165 000000
00040: 114446 007100 000000 013444 017036 024443 016000 123463
00050: 000000 000000 000447 017040 031460 017055 000000 114040
00060: 005000 041562 000000 000500 000000 017070 103467 000000
00070: 000447 017140 000000 031460 000000 000000 000000 000000
00100: SAME: TO 000200-1

*T RECORD 870 (%1546, #366)
00000: 036000 060156 105620 003324 000000 017052 014040 005000
00010: 031561 000000 000000 000500 017030 041572 000000 000500
00020: 000000 017070 103163 000000 000450 017000 000000 003165
00030: 000000 114446 007100 013444 000000 017050 024443 016000
00040: 174651 034001 000000 017062 031460 017214 000040 006000
00050: 000000 031460 017074 054040 005000 113165 000000 000000
00060: 000446 017040 017071 017071 000000 124041 001000 041572
00070: 000000 000500 000000 017030 000000 000000 000000 000000
00100: SAME: TO 000200-1

*T RECORD 871 (%1547, #367)
00000: 036000 060156 066143 003402 000000 031561 000000 000500
00010: 017070 113165 000000 017072 000446 016000 041562 000000
00020: 000000 000500 017070 103470 000000 000450 000000 017000
00030: 017064 000000 114040 003100 000000 113165 000000 000446
00040: 017040 017101 000000 017101 124041 001000 031571 000000
00050: 000000 000500 017030 041562 000000 000500 000000 017070
```

218

```
00060: 065557 034001 017100 113165 000000 017102 000446 016000
00070: 031561 000000 000000 000500 000000 000000 000000 000000
00100: SAME: TO 000200-1

*T RECORD 872 (%1550, #368)
00000: 036000 060156 120076 003460 000000 017070 103470 000000
00010: 000450 017000 000000 017074 000000 114040 003100 001560
00020: 000000 000006 000440 017340 030760 000000 000000 000500
00030: 017000 073260 000000 000452 000000 017000 043172 000000
00040: 000442 017000 000000 033760 100000 000451 017000 031760
00050: 000000 001007 000440 017340 021760 000000 000000 000500
00060: 017000 031460 017123 020040 000000 005000 001560 000015
00070: 000440 017340 000000 033760 000000 000000 000000 000000
00100: SAME: TO 000200-1

*T RECORD 873 (%1551, #369)
00000: 036000 060156 152103 003536 000000 000000 000511 017000
00010: 076267 034001 000000 017116 001560 000010 000440 017340
00020: 000000 113571 000000 000511 017000 031460 000000 017123
00030: 040040 005000 113571 000010 000000 000451 017000 031460
00040: 017121 140040 000000 005000 031467 017140 150440 005300
00050: 000000 031460 017214 000040 006000 103471 000000 000000
00060: 000451 017040 041562 017131 000000 040500 005030 031660
00070: 000000 000500 000000 017030 000000 000000 000000 000000
00100: SAME: TO 000200-1

*T RECORD 874 (%1552, #36A)
00000: 036000 060156 037140 003614 000000 113571 000010 000451
00010: 017000 113165 000000 000000 000446 017000 017136 017136
00020: 000000 124041 001000 031561 000000 000500 000000 017030
00030: 037141 034001 017134 113165 000000 000000 000446 017000
00040: 103471 000000 000000 000451 017000 103470 000000 000450
00050: 000000 017060 017125 000000 114040 003100 000000 033465
00060: 000000 000446 017000 031460 000000 017156 120040 006000
00070: 103471 000000 000000 000451 000000 000000 000000 000000
00100: SAME: TO 000200-1

*T RECORD 875 (%1553, #36B)
00000: 036000 060156 020562 003672 000000 017040 041562 017146
00010: 040500 005030 000000 031660 000000 000500 017030 113760
00020: 000000 000007 000451 017000 123463 000000 000000 000447
00030: 017000 031460 017153 114040 000000 005000 031561 000000
00040: 000500 017070 000000 103467 000000 000447 017140 041515
00050: 000000 034001 017152 041562 017150 120500 000000 005030
00060: 103163 000000 000450 017060 000000 003165 000000 114446
00070: 007100 013444 000000 017142 000000 000000 000000 000000
00100: SAME: TO 000200-1

*T RECORD 876 (%1554, #36C)
00000: 036000 060156 025535 003750 000000 024443 016000 031460
00010: 000000 000120 000000 015000 043260 000000 000446 017000
00020: 000000 001560 000013 000440 017340 031760 000000 000000
00030: 000500 017000 031460 017212 000000 114040 005000 031460
00040: 000000 000440 000000 017030 031461 000000 000500 015030
00050: 000000 031260 000000 000500 015030 031460 000000 000000
00060: 000100 015000 001560 000024 000000 000440 017340 073663
00070: 034001 017170 000000 030760 000000 000000 000000 000000
00100: SAME: TO 000200-1
```

```
*T RECORD 877 (%1555, #36D)
00000: 036000 060156 165245 004026 000000 000777 000440 017000
00010: 040660 000000 000000 000500 017000 033465 003435 000440
00020: 000000 006000 033260 000000 000446 017000 000000 041565
00030: 100000 003440 017037 033760 000000 000000 000514 017000
00040: 041566 100000 000000 003440 017036 003574 000000 000514
00050: 000000 017000 001574 134607 000440 017340 000000 031460
00060: 000000 000100 015000 031460 000000 000000 000040 007000
00070: 121166 000000 000000 000445 000000 000000 000000 000000
00100: SAME: TO 000200-1

*T RECORD 878 (%1556, #36E)
00000: 036000 060156 017106 004104 000000 017000 031460 017206
00010: 014040 005000 000000 013463 000000 000443 017000 115265
00020: 000000 034001 017206 031460 000000 000040 000000 011000
00030: 030760 000000 000400 011000 000000 033760 000000 000401
00040: 011000 033760 000000 000000 000400 017000 031460 000000
00050: 000000 000040 011000 031760 000000 000400 000000 007300
00060: 031460 000000 000120 015000 000000 123465 000000 000446
00070: 017000 031460 000000 000000 000000 000000 000000 000000
00100: SAME: TO 000200-1

*T RECORD 879 (%1557, #36F)
00000: 036000 060156 176656 004162 000000 021040 017000 001560
00010: 000013 000440 000000 017340 031760 000000 000500 017000
00020: 000000 031460 017225 114040 005000 001560 000000 000032
00030: 000440 017340 033760 000000 000000 000506 017000 040042
00040: 034001 017224 000000 031460 000000 021040 017000 031460
00050: 000000 000000 000040 011000 031760 000000 000000 000400
00060: 007300 031760 001007 000440 000000 017340 031760 000000
00070: 000500 017000 000000 031460 000000 000000 000000 000000
00100: SAME: TO 000200-1

*T RECORD 880 (%1560, #370)
00000: 036000 060156 117274 004240 000000 017252 020040 005000
00010: 001560 000024 000000 000440 017340 033760 000000 000501
00020: 000000 017000 043561 000017 000441 017000 000000 123561
00030: 000017 000442 017000 001560 000000 000010 000440 017340
00040: 033760 000000 000000 000503 017000 021760 005212 000440
00050: 000000 017300 031461 000000 000440 017140 000000 001663
00060: 034001 017242 031460 017245 000000 020040 005000 031563
00070: 000000 000500 000000 017070 000000 000000 000000 000000
00100: SAME: TO 000200-1

*T RECORD 881 (%1561, #371)
00000: 036000 060156 066436 004316 000000 013461 017241 000441
00010: 016000 073463 000000 000000 000443 017200 031462 000000
00020: 000000 000440 017140 031460 000000 020040 000000 007000
00030: 041563 000000 000500 017070 000000 013462 017246 000442
00040: 016000 001560 000000 000000 000440 017340 033760 000000
00050: 000000 000501 017000 001560 000006 000440 000000 017340
00060: 073760 000000 000502 017000 000000 001560 000007 000440
00070: 017340 053562 000000 000000 000000 000000 000000 000000
00100: SAME: TO 000200-1

*T RECORD 882 (%1562, #372)
00000: 036000 060156 153657 004374 000000 000502 017000 010246
```

```
00010: 034001 017260 000000 001560 000010 000440 017340 033760
00020: 000000 000000 000503 017000 003561 001250 000000 000044
00030: 017000 031460 017271 114040 000000 005000 001164 000000
00040: 000443 017340 000000 041562 000000 000500 017070 003563
00050: 000000 000010 000443 017000 031460 017264 000000 014040
00060: 005000 043260 000000 000443 000000 017000 001560 000002
00070: 000440 017340 000000 123563 000000 000000 000000 000000
00100: SAME: TO 000200-1

*T RECORD 883 (%1563, #373)
00000: 036000 060156 036401 004452 000000 000000 000505 017000
00010: 003161 000000 000000 000443 017300 113565 000001 000445
00020: 000000 017040 041562 000000 000100 017070 000000 062232
00030: 034001 017276 103463 017274 000000 114443 005300 001560
00040: 000006 000440 000000 017340 033760 000000 000502 017000
00050: 000000 001560 000015 000440 017340 033760 000000 000000
00060: 000503 017000 001560 000024 000000 000440 017340 033760
00070: 000017 000445 000000 017000 000000 000000 000000 000000
00100: SAME: TO 000200-1

*T RECORD 884 (%1564, #374)
00000: 036000 060156 022761 004530 000000 043565 000000 000505
00010: 017000 113165 000000 000000 000443 017030 001560 000010
00020: 000000 000040 017360 031460 017314 114040 000000 005000
00030: 001164 000000 000443 017340 000000 003563 000010 000443
00040: 017000 031562 000000 017311 014500 005070 145146 034001
00050: 000000 017314 001560 000004 000440 017340 000000 123563
00060: 000000 000505 017000 003161 000000 000000 000443 017300
00070: 113565 000010 000000 000445 000000 000000 000000 000000
00100: SAME: TO 000200-1

*T RECORD 885 (%1565, #375)
00000: 036000 060156 176261 004606 000000 017040 031562 000000
00010: 000100 017070 000000 003563 000010 000043 017300 017317
00020: 000000 000000 014040 003000 001560 000000 000000 000440
00030: 017340 033760 000000 000504 000000 017000 001560 000005
00040: 000440 017340 000000 033760 000000 000501 017000 001560
00050: 000000 000006 000440 017340 003561 000000 000000 000502
00060: 017000 001560 000007 000440 000000 017340 177057 034001
00070: 017332 003562 000000 000000 000000 000000 000000 000000
00100: SAME: TO 000200-1

*T RECORD 886 (%1566, #376)
00000: 036000 060156 033510 004664 000000 000502 017000 073462
00010: 000000 000442 000000 017000 001560 000001 000440 017340
00020: 000000 033760 000000 000507 017140 033760 000000 000000
00030: 000510 017140 033760 000000 000000 000511 017140 033760
00040: 000000 000512 000000 017000 121167 000000 000451 017000
00050: 000000 031460 017365 020040 005000 031460 000000 017354
00060: 114040 005000 001167 000000 000000 000444 017300 021171
00070: 000000 000450 000000 017000 000000 000000 000000 000000
00100: SAME: TO 000200-1

*T RECORD 887 (%1567, #377)
00000: 036000 060156 001210 004742 000000 033470 017350 114454
00010: 005000 013471 000000 000000 000454 017000 021443 034001
00020: 000000 017350 023167 000000 000454 017040 000000 041562
00030: 000000 000500 017070 103474 000000 000000 000454 017140
```

```
00040: 017365 017351 000000 014040 001000 001171 000000 000444
00050: 000000 017300 013467 000000 000454 017000 000000 021167
00060: 000000 000452 017000 031460 000000 017361 014040 005000
00070: 033472 000000 000000 000454 000000 000000 000000 000000
00100: SAME: TO 000200-1

*T RECORD 888 (%1570, #378)
00000: 036000 060156 140402 005020 000000 017000 023171 000000
00010: 000454 017040 000000 031561 000000 000500 017070 103474
00020: 000000 000000 000454 017140 031460 017362 000000 014040
00030: 005000 121170 000000 000452 000000 017000 120275 034001
00040: 017366 031460 000000 017415 020040 005000 031460 017404
00050: 000000 114040 005000 101170 000000 000444 000000 017300
00060: 021171 000000 000450 017000 000000 031460 017377 014040
00070: 005000 001171 000000 000000 000000 000000 000000 000000
00100: SAME: TO 000200-1

*T RECORD 889 (%1571, #379)
00000: 036000 060156 050211 005076 000000 000444 017300 033760
00010: 005000 000455 000000 017000 121575 000000 000520 017000
00020: 000000 031460 017415 114040 005000 123572 000000 000000
00030: 000534 017000 013164 000000 000000 000454 017040 031561
00040: 000000 000500 000000 017070 103474 000000 000454 017140
00050: 000000 017415 017401 014040 001000 070414 000000 034001
00060: 017404 001167 000000 000444 000000 017300 021167 000000
00070: 000452 017000 000000 031460 000000 000000 000000 000000
00100: SAME: TO 000200-1

*T RECORD 890 (%1572, #37A)
00000: 036000 060156 105536 005154 000000 017410 114040 005000
00010: 101172 000000 000000 000444 017300 123570 000000 000534
00020: 000000 017040 013164 000000 000454 017000 000000 041562
00030: 000000 000500 017070 103474 000000 000000 000454 017140
00040: 031460 017412 000000 014040 005000 001560 000001 000440
00050: 000000 017300 031471 000000 000440 017070 000000 031472
00060: 000000 000440 007170 033460 000000 000000 000452 017000
00070: 031460 000000 000000 000040 000000 000000 000000 000000
00100: SAME: TO 000200-1

*T RECORD 891 (%1573, #37B)
00000: 036000 060156 135064 005232 000000 037150 012434 034001
00010: 017422 031760 000000 001000 000440 017340 041562 000000
00020: 000000 000500 017070 031460 000000 000040 000000 027170
00030: 031460 000000 000040 037150 000000 031760 001000 000440
00040: 017340 031562 000000 000000 000500 017070 031460 000000
00050: 000000 000040 027170 001060 000000 000440 000000 017340
00060: 033760 000000 000501 017000 000000 041260 000000 000040
00070: 017070 031460 000000 000000 000000 000000 000000 000000
00100: SAME: TO 000200-1

*T RECORD 892 (%1574, #37C)
00000: 036000 060156 131540 005310 000000 020040 007100 101760
00010: 000000 000520 000000 017340 003561 000000 000502 017000
00020: 000000 121162 000000 000443 017000 077157 000000 034001
00030: 017440 031460 017442 114040 000000 005000 033463 000000
00040: 000442 017000 000000 121162 000000 000444 017000 031460
00050: 000000 017445 040040 005000 033464 000000 000000 000442
00060: 017000 031462 000000 000440 000000 017070 001560 000040
```

222

```
00070: 000440 017300 000000 041260 000000 000000 000000 000000
00100: SAME: TO 000200-1

*T RECORD 893 (%1575, #37D)
00000: 036000 060156 131323 005366 000000 000000 000440 007070
00010: 001560 000003 000000 000440 017340 033760 000000 000502
00020: 000000 017140 033760 000000 000503 017000 000000 001560
00030: 000001 000440 017300 031462 000000 000000 000440 017070
00040: 031463 000000 000000 000440 017170 100450 034001 017456
00050: 000000 001560 000015 000440 017340 033760 000000 000000
00060: 000502 017000 001560 000016 000000 000440 017340 003562
00070: 000000 000503 000000 017000 000000 000000 000000 000000
00100: SAME: TO 000200-1

*T RECORD 894 (%1576, #37E)
00000: 036000 060156 037356 005444 000000 001560 000003 000440
00010: 017300 031462 000000 000000 000440 017070 011463 000000
00020: 000000 000440 007170 001560 000024 000440 000000 017340
00030: 033760 000000 000501 017000 000000 001560 000025 000440
00040: 017340 043561 000000 000017 000442 017000 003562 000017
00050: 000000 000442 017000 005562 000000 000502 000000 017002
00060: 035462 000001 000642 017002 000000 026704 034001 017474
00070: 001560 000027 000000 000440 000000 000000 000000 000000
00100: SAME: TO 000200-1

*T RECORD 895 (%1577, #37F)
00000: 036000 060156 020603 005522 000000 017340 031760 000000
00010: 000500 017300 000000 031461 000000 000440 017070 103462
00020: 000000 000000 000442 017000 121562 000040 000000 000440
00030: 017000 031460 017503 114040 000000 005000 033760 000040
00040: 000442 017000 000000 031462 000000 000440 007170 001560
00050: 000000 000024 000440 017340 033760 000000 000000 000501
00060: 017000 001560 000016 000440 000000 017340 033760 000000
00070: 000502 017000 000000 001560 000000 000000 000000 000000
00100: SAME: TO 000200-1

*T RECORD 896 (%1600, #380)
00000: 036000 060156 137456 005600 000000 000036 000440 017340
00010: 031760 000000 000000 000500 017000 046364 016001 017512
00020: 000000 001560 000027 021440 017340 031760 000000 000000
00030: 000500 017300 031461 000000 000000 000440 017070 031462
00040: 000000 000440 000000 017170 001700 000020 000440 017170
00050: 000000 101760 000000 000440 017170 031460 000000 000000
00060: 000040 007000 063124 006400 000000 134613 134630 134126
00070: 134061 000001 000000 134652 000000 000000 000000 000000
00100: SAME: TO 000200-1

*T RECORD 897 (%1601, #381)
00000: 036000 060156 023313 005656 000000 134251 134204 000002
00010: 134674 134374 000000 134327 000010 177777 035032 034001
00020: 000000 017521 031460 025732 000040 006000 000000 031760
00030: 146160 000440 017340 031760 000000 000000 000500 017000
00040: 041260 017527 000000 020440 005070 031460 032125 000040
00050: 000000 006000 031460 032130 000040 006000 000000 033760
00060: 134612 000457 017000 101477 000000 000000 000440 017340
00070: 101760 000000 000000 000500 000000 000000 000000 000000
00100: SAME: TO 000200-1
```

223

```
*T RECORD 898 (%1602, #382)
00000: 036000 060156 116020 005734 000000 017000 033760 017554
00010: 020501 005140 000000 033760 000000 000502 017140 033760
00020: 000000 000000 000503 017140 033760 000000 000000 000504
00030: 017000 033760 000000 000537 000000 017000 125164 034001
00040: 017537 031760 000000 000101 000440 017340 041564 000000
00050: 000000 000500 017000 003740 000000 120444 000000 017000
00060: 035464 000000 000444 017000 000000 001562 000046 000440
00070: 017340 031564 000000 000000 000000 000000 000000 000000
00100: SAME: TO 000200-1

*T RECORD 899 (%1603, #383)
00000: 036000 060156 106057 006012 000000 000500 017030 001561
00010: 000010 000440 000000 017360 001562 000045 000440 017340
00020: 000000 001561 000011 000440 017360 031460 000000 000000
00030: 005040 017000 033462 017556 000000 000440 006000 033463
00040: 017556 001440 000000 006000 031460 017530 000040 016000
00050: 000000 031460 025763 000040 006000 153552 000000 034001
00060: 017555 031460 000000 000040 000000 007000 001560 000040
00070: 000440 017340 000000 001501 000000 000000 000000 000000
00100: SAME: TO 000200-1

*T RECORD 900 (%1604, #384)
00000: 036000 060156 005016 006070 000000 000000 000440 017360
00010: 001560 000013 000000 000440 017340 001501 000002 000440
00020: 000000 017360 001560 000030 000440 017340 000000 001501
00030: 000004 000440 017300 001700 000000 000000 000520 017360
00040: 001560 000031 000000 000440 017340 001501 000005 000440
00050: 000000 017300 001700 000000 000520 017360 000000 033461
00060: 017572 150452 005000 003572 000000 000004 000452 017000
00070: 003560 000041 000000 000440 000000 000000 000000 000000
00100: SAME: TO 000200-1

*T RECORD 901 (%1605, #385)
00000: 036000 060156 120367 006146 000000 017340 041726 034001
00010: 017573 003572 000000 000012 000452 017360 103460 000000
00020: 000000 000440 017340 103472 000000 000452 000000 017360
00030: 103460 000000 000440 017340 000000 103472 000000 000452
00040: 017360 103460 000000 000000 000440 017340 103472 000000
00050: 000000 000452 017360 031460 000000 000040 000000 007000
00060: 031760 017615 000440 017030 000000 031460 017765 000040
00070: 006000 031760 000000 017615 000000 000000 000000 000000
00100: SAME: TO 000200-1

*T RECORD 902 (%1606, #386)
00000: 036000 060156 001176 006224 000000 000440 017030 031460
00010: 017774 000040 000000 006000 031460 000000 000040 007000
00020: 000000 031760 017617 000440 017030 145767 000000 034001
00030: 017611 031460 017765 000040 000000 006000 031760 017617
00040: 000440 017030 000000 031460 017774 000040 006000 031460
00050: 000000 000000 000040 007000 001560 000040 000000 000440
00060: 017300 041260 000000 000440 000000 007070 001560 000040
00070: 000440 017300 000000 031760 000000 000000 000000 000000
00100: SAME: TO 000200-1

*T RECORD 903 (%1607, #387)
00000: 036000 060156 114607 006302 000000 000001 000440 017070
00010: 031460 000000 000000 000040 007000 031760 000102 000440
```

```
00020: 000000 017340 031760 000000 000500 017000 000000 031460
00030: 017636 020040 005000 031760 000000 017643 000440 017030
00040: 031460 017762 000000 000040 006000 132777 034001 017627
00050: 000000 031760 017643 000440 017030 031460 000000 017771
00060: 000040 006000 073760 000063 000000 000442 017000 031460
00070: 017421 000040 000000 006000 000000 000000 000000 000000
00100: SAME: TO 000200-1
```

*T RECORD 904 (%1610, #388)
```
00000: 036000 060156 104537 006360 000000 031460 027760 000040
00010: 006000 033760 000000 100003 000442 017000 031460 017425
00020: 000000 000040 006000 031760 101410 000440 000000 017340
00030: 033760 000000 007500 017000 000000 031460 017642 020040
00040: 005000 031560 000000 100000 000440 017070 031460 000000
00050: 000000 000040 007000 001560 000017 000440 000000 017340
00060: 033760 060000 000501 017001 000000 031756 034001 017645
00070: 041260 000000 000000 000440 000000 000000 000000 000000
00100: SAME: TO 000200-1
```

*T RECORD 905 (%1611, #389)
```
00000: 036000 060156 001414 006436 000000 017030 001560 000001
00010: 000440 017360 000000 031461 000000 000440 017170 041260
00020: 000000 000000 000440 017170 031461 000000 000000 000440
00030: 017170 031760 144742 000440 000000 017340 033760 000002
00040: 000442 017000 000000 121562 000000 000500 017000 043260
00050: 000000 017657 120442 005000 033760 001000 000000 000442
00060: 017000 001560 000022 000440 000000 017340 031760 000000
00070: 000500 017000 000000 031460 000000 000000 000000 000000
00100: SAME: TO 000200-1
```

*T RECORD 906 (%1612, #38A)
```
00000: 036000 060156 053005 006514 000000 017663 020040 005000
00010: 121562 000000 000000 000500 017030 002622 034001 017663
00020: 000000 001560 000013 000440 017360 001560 000000 000015
00030: 000440 017360 001560 000023 000000 000440 017340 001560
00040: 000014 000440 000000 017360 001560 000016 000440 017360
00050: 000000 041260 000000 000440 017030 001560 000000 000024
00060: 000440 017360 001560 000031 000000 000440 017360 001560
00070: 000036 000440 000000 017360 000000 000000 000000 000000
00100: SAME: TO 000200-1
```

*T RECORD 907 (%1613, #38B)
```
00000: 036000 060156 024722 006572 000000 001560 000012 000440
00010: 017360 001560 000000 000021 000440 017360 001560 000037
00020: 000000 000440 017360 031760 001007 000440 000000 017340
00030: 021760 000000 000500 017000 000000 120774 034001 017701
00040: 031460 017703 000000 020040 005000 001560 000010 000440
00050: 000000 017360 101760 000000 000440 017030 000000 001560
00060: 000030 000440 017360 001560 000000 000040 000440 017360
00070: 031460 000000 000000 000040 000000 000000 000000 000000
00100: SAME: TO 000200-1
```

*T RECORD 908 (%1614, #38C)
```
00000: 036000 060156 027133 006650 000000 007000 033465 000000
00010: 000443 017000 000000 001560 000000 000440 017340 033760
00020: 000000 000000 000501 017000 033760 000000 000000 000502
00030: 017000 003563 000000 000503 000000 017000 001560 000003
00040: 000440 017340 000000 003561 000000 000501 017140 003562
```

225

```
00050: 000000 000000 000502 017000 126046 034001 000000 017717
00060: 121162 000000 000443 017000 000000 113161 017756 014443
00070: 005000 031460 000000 017756 000000 000000 000000 000000
00100: SAME: TO 000200-1


*T RECORD 909 (%1615, #38D)
00000: 036000 060156 114615 006726 000000 014040 005000 001560
00010: 000007 000440 000000 017340 033760 000000 000504 017000
00020: 000000 001560 000036 000440 017340 031460 000000 017727
00030: 150040 005000 001560 177771 000000 000440 017340 031760
00040: 000000 000500 000000 017000 043260 000000 122445 017000
00050: 000000 031460 017740 050040 005000 031461 000000 000000
00060: 000440 017340 013463 000000 000000 000443 017000 041564
00070: 017760 014500 000000 005000 000000 000000 000000 000000
00100: SAME: TO 000200-1


*T RECORD 910 (%1616, #38E)
00000: 036000 060156 127473 007004 000000 034515 034001 017735
00010: 017733 017737 000000 020042 001140 103465 000000 000445
00020: 000000 017000 103465 017733 000445 016000 000000 001560
00030: 000036 000440 017340 031760 000000 000000 000500 017000
00040: 031461 017751 000000 140440 005340 013463 000000 000443
00050: 000000 017000 041564 017760 014500 005000 000000 103465
00060: 000000 000045 017000 017743 000000 017750 020042 001140
00070: 103465 000000 000000 000445 000000 000000 000000 000000
00100: SAME: TO 000200-1


*T RECORD 911 (%1617, #38F)
00000: 036000 060156 127374 007062 000000 017000 003425 017743
00010: 000445 016000 000000 013463 000000 000443 017000 041564
00020: 000000 017760 014500 005000 167222 034001 000000 017753
00030: 017751 017755 020042 001140 000000 103465 000000 000445
00040: 017000 103465 000000 017751 000445 016000 033760 003777
00050: 000000 000445 017000 031460 000000 000040 000000 007000
00060: 001560 000024 000440 017340 000000 003565 000000 000505
00070: 007000 031460 000000 000000 000000 000000 000000 000000
00100: SAME: TO 000200-1


*T RECORD 912 (%1620, #390)
00000: 036000 060156 147536 007140 000000 000120 015000 031760
00010: 000102 000440 000000 017300 031460 017767 000040 016000
00020: 000000 031460 000000 000120 015000 031760 000000 000101
00030: 000440 017300 031460 000000 000000 001020 015000 031460
00040: 020000 000040 000000 016000 034174 034001 017771 031460
00050: 000000 000000 000120 015000 031760 000102 000000 000440
00060: 017300 031460 017776 000040 000000 016000 031460 000000
00070: 000120 015000 000000 031760 000000 000000 000000 000000
00100: SAME: TO 000200-1


*T RECORD 913 (%1621, #391)
00000: 036000 060156 153507 007216 000000 000101 000440 017300
00010: 031460 000000 000000 000020 015000 031460 000000 005040
00020: 000000 017000 031460 000000 000500 015030 000000 031461
00030: 000000 000500 015030 031462 000000 000000 000500 015030
00040: 031460 000000 000000 000100 015000 031460 007775 004040
00050: 000000 011000 031460 000000 000000 015000 000000 033760
00060: 177772 000441 017040 132655 000000 034001 020007 033760
00070: 000000 000502 000000 017000 000000 000000 000000 000000
```

226

```
00100: SAME: TO 000200-1

*T RECORD 914 (%1622, #392)
00000: 036000 060156 065553 007274 000000 001700 134043 000440
00010: 017340 031760 000000 000000 000500 017340 031462 000000
00020: 000000 000440 017000 033760 020026 044500 000000 006000
00030: 003561 000001 000441 017140 000000 035462 020012 120442
00040: 005002 031460 000000 000000 000040 011000 031460 000000
00050: 000000 000040 011000 033760 000000 000402 000000 011000
00060: 033760 000000 000401 011000 000000 033760 000000 000400
00070: 011000 031760 000000 000000 000000 000000 000000 000000
00100: SAME: TO 000200-1

*T RECORD 915 (%1623, #393)
00000: 036000 060156 026705 007352 000000 000400 011030 031760
00010: 000000 003400 000000 011010 151612 034001 020025 031760
00020: 000000 000000 000400 007300 031461 000000 000000 000520
00030: 015300 031462 000000 000520 000000 015300 031460 000000
00040: 000120 015000 000000 031460 000000 000020 015000 031460
00050: 000000 007772 004040 011000 033760 007771 000000 004402
00060: 011000 033760 007773 004401 000000 011000 031460 020051
00070: 000040 006000 000000 031460 000000 000000 000000 000000
00100: SAME: TO 000200-1

*T RECORD 916 (%1624, #394)
00000: 036000 060156 011675 007430 000000 007765 000120 014000
00010: 031460 007766 000000 000020 014000 031460 007767 000500
00020: 000000 014030 031461 007770 000500 014030 000000 031462
00030: 007771 000500 014030 165720 000000 034001 020043 031460
00040: 007772 000100 000000 014000 031460 000000 000040 011000
00050: 000000 031760 000000 003400 011010 033760 000000 000000
00060: 000402 011000 033760 000000 000000 000401 011000 031760
00070: 000000 000400 000000 007300 000000 000000 000000 000000
00100: SAME: TO 000200-1

*T RECORD 917 (%1625, #395)
00000: 036000 060156 141157 007506 000000 031460 000000 000000
00010: 015000 031460 000000 000000 000040 007000 031460 000000
00020: 000000 000120 015000 031760 000102 000440 000000 017300
00030: 031460 020060 000040 016000 000000 031460 000000 000120
00040: 015000 031760 000000 000101 000440 017300 031460 000000
00050: 000000 001020 015000 073713 034001 020061 000000 031460
00060: 020071 000040 016000 031460 000000 000000 000120 015000
00070: 031760 000102 000000 000440 000000 000000 000000 000000
00100: SAME: TO 000200-1

*T RECORD 918 (%1626, #396)
00000: 036000 060156 022204 007564 000000 017300 031460 020067
00010: 000040 016000 000000 031460 000000 000120 015000 031760
00020: 000000 000101 000440 017300 031460 000000 000000 000020
00030: 015000 031460 000000 005040 000000 017000 031461 000000
00040: 000440 017030 000000 031462 000000 000500 015030 031460
00050: 000000 000000 000100 015000 033760 177772 000000 000441
00060: 017040 033760 000000 000502 000000 017000 001700 134043
00070: 000440 017340 000000 061627 000000 000000 000000 000000
00100: SAME: TO 000200-1

*T RECORD 919 (%1627, #397)
```

227

```
00000: 036000 060156 177232 007642 000000 026001 020077 031760
00010: 000000 000500 000000 017340 031462 000000 000440 017000
00020: 000000 033760 020105 044500 005000 003561 000000 000001
00030: 000441 017140 035462 020100 000000 120442 005002 033760
00040: 177777 000440 000000 017000 031460 000000 000040 011000
00050: 000000 033760 000000 000402 011000 033760 000000 000000
00060: 000401 011000 031760 000000 000000 003400 011010 031760
00070: 000000 000400 000000 007300 000000 000000 000000 000000
00100: SAME: TO 000200-1
```

*T RECORD 920 (%1630, #398)
```
00000: 003000 060101 151232 007720 000000 061211 000000 000000
00010: SAME: TO 000200-1
```

*T RECORD 921 (%1631, #399)
```
00000: 002000 120000 120000 000000 000000 000000 000000 000000
00010: SAME: TO 000200-1
```

*T RECORD 922 (%1632, #39A)
```
00000: 025000 020000 051073 077103 051123 051040 002757 000000
00010: SAME: TO 000020-1
00020: 000000 020103 052522 051517 051047 051040 043101 052110
00030: 042522 020040 036070 033060 031461 030456 030462 032467
00040: 037040 020040 020040 020040 020040 020040 020040 020040
00050: 020040 020040 000000 000000 000000 000000 000000 000000
00060: SAME: TO 000200-1
```

*T RECORD 923 (%1633, #39B)
```
00000: 003400 040001 061227 077103 051123 051000 000000 000000
00010: SAME: TO 000200-1
```

*T RECORD 924 (%1634, #39C)
```
00000: 036000 060156 014035 000000 000000 002756 034000 134716
00010: 000000 000000 000000 000000 000000 000000 000000 000000
00020: 000000 000000 000000 134740 134745 134752 000000 134765
00030: 135000 135011 000000 000000 000000 000500 000000 000000
00040: 005400 000577 000000 177777 000000 000000 005400 000777
00050: 000000 177777 000000 000000 006200 000577 000000 006200
00060: 000577 006200 000577 006200 000000 000577 177777 000000
00070: 000000 007620 000000 000777 000000 000000 000000 000000
00100: SAME: TO 000200-1
```

*T RECORD 925 (%1635, #39D)
```
00000: 036000 060156 127776 000056 000000 007620 000777 007620
00010: 000777 007620 000000 000777 177777 000000 000000 005400
00020: 000000 000577 005400 000577 143553 012000 000000 135006
00030: 005400 000577 177777 000000 000000 000000 001400 000777
00040: 001400 000000 000000 005400 000777 177777 000000 000000
00050: 000000 000007 000000 000000 000000 000000 000000 177777
00060: 155607 020400 135034 134742 000000 033400 134747 033400
00070: 134754 037200 000000 134756 000000 000000 000000 000000
00100: SAME: TO 000200-1
```

*T RECORD 926 (%1636, #39E)
```
00000: 036000 060156 117425 000134 000000 037200 134760 037200
00010: 134762 037200 000000 134767 046720 134771 046720 134773
00020: 000000 046720 134775 046720 135002 033400 000000 135004
00030: 033400 135006 033400 135013 000000 007400 135015 007400
```

EP 0 455 351 A2

```
00040: 135017 033400 000000 177777 171373 034001 020112 033760
00050: 000000 077777 000442 017000 041562 000000 000000 000500
00060: 017030 031760 134726 000440 000000 017360 031560 100000
00070: 000440 017030 000000 031760 000000 000000 000000 000000
00100: SAME: TO 000200-1

*T RECORD 927 (%1637, #39F)
00000: 036000 060156 143720 000212 000000 134716 000440 017360
00010: 041161 000000 000000 000442 017030 031760 134725 000440
00020: 000000 017360 031760 001007 000440 017340 000000 031760
00030: 000000 000500 017000 031460 000000 020127 020040 005000
00040: 101760 000000 000000 000440 017030 031760 145607 000440
00050: 000000 017360 031460 020132 000040 016000 000000 033760
00060: 000002 000440 017000 064052 000000 034001 020130 001560
00070: 104516 000440 000000 017340 000000 000000 000000 000000
00100: SAME: TO 000200-1

*T RECORD 928 (%1640, #3A0)
00000: 036000 060156 121551 000270 000000 031460 000000 000100
00010: 037330 031460 000000 000000 000040 007000 031760 134736
00020: 000000 000440 017340 031760 000000 000500 000000 017000
00030: 031460 000000 020040 007000 000000 031760 134737 000440
00040: 017340 021760 000000 000000 000500 017070 031460 000000
00050: 000000 120040 007000 031760 000500 000440 000000 017070
00060: 033760 110000 000441 017000 000000 031460 020457 000040
00070: 016000 031760 000000 134716 000000 000000 000000 000000
00100: SAME: TO 000200-1

*T RECORD 929 (%1641, #3A1)
00000: 036000 060156 107377 000346 000000 000440 017340 031760
00010: 000000 000500 000000 017000 101211 034001 020146 031460
00020: 000000 020176 014040 005000 031760 001007 000000 000440
00030: 017340 033760 000000 000500 000000 017000 031760 134735
00040: 000440 017340 000000 041560 000000 000500 017000 031460
00050: 000000 020176 020040 005000 041260 000000 000000 000440
00060: 017070 033760 134721 000440 000000 017000 001560 000002
00070: 000440 017340 000000 033760 000000 000000 000000 000000
00100: SAME: TO 000200-1

*T RECORD 930 (%1642, #3A2)
00000: 036000 060156 151261 000424 000000 000000 000505 017000
00010: 031460 020065 000000 000040 006000 031460 017707 000040
00020: 000000 006000 031465 000000 000440 017030 000000 031760
00030: 134721 000440 017360 037020 000000 034001 020164 033760
00040: 134722 000440 000000 017000 001560 000002 000440 017340
00050: 000000 033760 000000 000505 017000 031460 000000 020056
00060: 000040 006000 031460 017707 000000 000040 006000 031465
00070: 000000 000440 000000 017030 000000 000000 000000 000000
00100: SAME: TO 000200-1

*T RECORD 931 (%1643, #3A3)
00000: 036000 060156 011046 000502 000000 031760 134722 000440
00010: 017360 031760 000000 135022 000440 017340 031760 000000
00020: 000000 000500 017000 031460 020352 140040 000000 006000
00030: 031460 000000 000040 007000 000000 031760 134716 000440
00040: 017340 033760 000000 000000 000500 017000 031460 020333
00050: 000000 114040 005000 164246 034001 020202 000000 041560
00060: 077777 000440 017070 031460 000000 000000 000040 037150
```

229

```
00070: 031760 135027 000000 000440 000000 000000 000000 000000
00100: SAME: TO 000200-1


*T RECORD 932 (%1644, #3A4)
00000: 036000 060156 104436 000560 000000 017340 033760 000000
00010: 000500 017000 000000 041260 000000 000040 017070 031460
00020: 000000 020565 120040 026170 031760 135026 000000 000440
00030: 017340 033760 000000 000502 000000 017000 031460 020236
00040: 144040 005000 000000 031760 134726 115440 017340 033760
00050: 000000 000000 000500 017000 031760 135030 000000 000440
00060: 017340 031760 000000 000500 000000 017000 031460 020223
00070: 020040 005000 000000 142664 000000 000000 000000 000000
00100: SAME: TO 000200-1


*T RECORD 933 (%1645, #3A5)
00000: 036000 060156 132205 000636 000000 034001 020220 111560
00010: 007400 000440 000000 017000 020236 020226 014041 001000
00020: 000000 031460 020227 000040 016000 111560 000000 001400
00030: 000440 017000 020236 020226 000000 014041 001000 031460
00040: 020227 000040 000000 016000 031460 020236 150040 005000
00050: 000000 033760 100000 000441 017000 061161 000000 000000
00060: 000442 017030 031760 135026 000000 000440 017360 033760
00070: 000200 000440 000000 017000 000000 000000 000000 000000
00100: SAME: TO 000200-1


*T RECORD 934 (%1646, #3A6)
00000: 036000 060156 175660 000714 000000 031760 030007 014440
00010: 017740 061560 000000 000000 014500 017470 031460 030735
00020: 000000 000040 006000 142204 034001 020236 000000 033760
00030: 134721 006446 017000 001566 000000 000002 000440 017340
00040: 031460 000000 000000 000100 015000 031460 000000 000020
00050: 000000 015000 031460 020410 000040 006000 000000 031460
00060: 000000 000040 011000 031760 000000 000000 003400 011010
00070: 001566 000002 000000 000440 000000 000000 000000 000000
00100: SAME: TO 000200-1


*T RECORD 935 (%1647, #3A7)
00000: 036000 060156 103056 000772 000000 017340 033760 000000
00010: 001505 017000 000000 111565 000000 000400 017000 031460
00020: 000000 020252 020040 005000 031460 000000 000000 002040
00030: 017000 031460 000000 000020 000000 015000 031460 020065
00040: 000040 006000 000000 116576 034001 020254 031460 017707
00050: 000000 000040 006000 031460 000000 000040 000000 011000
00060: 031760 000000 003400 017010 000000 031465 000000 000440
00070: 017030 031466 000000 000000 000000 000000 000000 000000
00100: SAME: TO 000200-1


*T RECORD 936 (%1650, #3A8)
00000: 036000 060156 010576 001050 000000 000440 017360 033760
00010: 134722 000446 000000 017000 001566 000002 000440 017340
00020: 000000 031460 000000 000100 015000 031460 000000 000000
00030: 000020 015000 031460 020410 000000 000040 006000 031460
00040: 000000 000040 000000 011000 031760 000000 003400 011010
00050: 000000 001566 000002 000440 017340 033760 000000 000000
00060: 005505 017000 005033 034001 000000 020272 111565 000000
00070: 000400 017000 000000 031460 000000 000000 000000 000000
00100: SAME: TO 000200-1
```

```
*T RECORD 937 (%1651, #3A9)
00000: 036000 060156 012432 001126 000000 020275 020040 005000
00010: 031460 000000 000000 002040 017000 031460 000000 000020
00020: 000000 015000 031460 020056 000040 006000 000000 031460
00030: 017707 000040 006000 031460 000000 000000 000040 011000
00040: 031760 000000 000000 003400 017010 031465 000000 000420
00050: 000000 015030 031466 020602 054440 006360 000000 041260
00060: 000000 000440 017030 031760 000000 134735 000440 017360
00070: 031760 135022 000000 000440 000000 000000 000000 000000
00100: SAME: TO 000200-1


*T RECORD 938 (%1652, #3AA)
00000: 036000 060156 136014 001204 000000 017340 031760 000000
00010: 000500 017000 000000 025305 034001 020310 031460 020352
00020: 000000 140040 006000 031760 134716 000440 000000 017340
00030: 031760 000000 000500 017000 000000 031460 020354 044040
00040: 005000 031460 000000 022463 000040 006000 101260 000000
00050: 000000 000440 017000 031460 020453 020040 000000 006000
00060: 031760 135025 000440 017340 000000 031760 000000 000500
00070: 017000 031460 000000 020345 000000 000000 000000 000000
00100: SAME: TO 000200-1


*T RECORD 939 (%1653, #3AB)
00000: 036000 060156 073144 001262 000000 114040 005000 101760
00010: 000000 000500 000000 017070 031760 134716 000440 017340
00020: 000000 031460 000000 000040 011160 031760 000000 000000
00030: 003400 017010 073102 034001 000000 020326 031460 020333
00040: 154040 005000 000000 033760 000003 000440 037150 031760
00050: 000000 001000 000440 017340 031560 000000 000000 000500
00060: 017070 031460 000000 000040 000000 037170 031760 001007
00070: 000440 017340 000000 031760 000000 000000 000000 000000
00100: SAME: TO 000200-1


*T RECORD 940 (%1654, #3AC)
00000: 036000 060156 156001 001340 000000 000000 000500 017000
00010: 031460 020341 000000 020040 005000 041260 000000 000440
00020: 000000 017030 031760 145607 000440 017360 000000 031460
00030: 020344 000040 016000 033760 000000 000002 000440 017000
00040: 001560 104516 000000 000440 017340 031460 000000 000100
00050: 000000 037320 074047 034001 020344 031460 000000 000000
00060: 000040 007000 031760 135023 000000 000440 017340 031760
00070: 000000 000500 000000 017000 000000 000000 000000 000000
00100: SAME: TO 000200-1


*T RECORD 941 (%1655, #3AD)
00000: 036000 060156 164540 001416 000000 031460 020352 140040
00010: 006000 031760 000000 135024 000440 017340 111760 020323
00020: 000000 000500 016170 031460 000000 000100 000000 015000
00030: 031460 000000 000040 007000 000000 041260 000000 000440
00040: 017030 031760 000000 135025 000440 017360 033760 000002
00050: 000000 000440 017000 031760 134716 000440 000000 017340
00060: 041560 000000 000500 017000 000000 031460 020370 120040
00070: 005000 104245 000000 034001 000000 000000 000000 000000
00100: SAME: TO 000200-1


*T RECORD 942 (%1656, #3AE)
00000: 036000 060156 154004 001474 000000 020362 031460 000000
00010: 000040 017140 000000 041560 000000 000500 017000 031460
```

```
00020: 000000 020407 020040 005000 100760 000000 000000 000440
00030: 017000 031460 030121 000040 000000 006000 031460 020407
00040: 000040 016000 000000 033760 000010 000440 017000 041560
00050: 000000 000000 000500 017000 031460 020401 000000 120040
00060: 005000 031460 000000 000040 000000 017140 041560 000000
00070: 000500 017000 000000 031460 000000 000000 000000 000000
00100: SAME: TO 000200-1


*T RECORD 943 (%1657, #3AF)
00000: 036000 060156 077621 001552 000000 020407 020040 005000
00010: 030760 000015 000000 000440 017000 031460 030121 000040
00020: 000000 006000 100077 034001 020400 031460 000000 020407
00030: 000040 016000 033760 000004 000000 000440 017000 041560
00040: 000000 000500 000000 017000 031460 020407 120040 005000
00050: 000000 031460 000000 000040 017140 041560 000000 000000
00060: 000500 017000 020407 022170 000000 120040 002000 031460
00070: 020323 000040 000000 016000 000000 000000 000000 000000
00100: SAME: TO 000200-1


*T RECORD 944 (%1660, #3B0)
00000: 036000 060156 120445 001630 000000 001566 000004 000440
00010: 017340 033760 000000 000000 000501 017000 033760 000002
00020: 000000 000442 017000 031760 134720 000440 000000 017340
00030: 037760 000000 000503 017002 000000 001566 000006 000440
00040: 017300 134644 000000 034001 020416 001563 000000 000520
00050: 000000 017340 101760 000000 000500 017300 000000 031460
00060: 000000 000040 017140 121561 000000 000000 000500 017000
00070: 031460 020430 000000 114040 000000 000000 000000 000000
00100: SAME: TO 000200-1


*T RECORD 945 (%1661, #3B1)
00000: 036000 060156 134652 001706 000000 005000 001562 000000
00010: 000520 017340 000000 031760 000000 000500 017000 031460
00020: 000000 020421 114040 005000 031460 000000 000000 000040
00030: 017240 031460 020446 000040 000000 016000 033760 000000
00040: 000505 017140 000000 033760 000000 000504 017200 031460
00050: 000000 000000 000040 017240 033760 000000 000000 000503
00060: 017240 076017 034001 020434 000000 033760 000000 000502
00070: 017000 113163 000000 000000 000000 000000 000000 000000
00100: SAME: TO 000200-1


*T RECORD 946 (%1662, #3B2)
00000: 036000 060156 065273 001764 000000 000444 017000 113162
00010: 000000 000445 000000 017000 120161 000000 000442 017000
00020: 000000 033464 003435 000440 006000 033461 000000 000000
00030: 000440 017000 033465 003325 000000 000441 006000 035465
00040: 000000 000445 000000 017002 121160 000000 000445 017000
00050: 000000 003141 000000 114443 017030 031760 000000 000000
00060: 000500 017000 031460 020451 000000 114040 005000 041260
00070: 000000 000440 000000 017030 000000 000000 000000 000000
00100: SAME: TO 000200-1


*T RECORD 947 (%1663, #3B3)
00000: 036000 060156 150036 002042 000000 001566 000002 000440
00010: 017360 034242 000000 034001 020452 031460 000000 000040
00020: 000000 007000 031760 101373 000440 017340 000000 031760
00030: 000000 000500 017000 031460 000000 000000 044040 007000
00040: 033760 114000 000000 000441 017000 031460 001021 000040
```

```
00050: 000000 006000 031460 000000 000100 037330 000000 113760
00060: 000006 000443 017000 033760 000000 134721 000444 017340
00070: 031561 020465 000000 000500 000000 000000 000000 000000
00100: SAME: TO 000200-1


*T RECORD 948 (%1664, #3B4)
00000: 036000 060156 130151 002120 000000 016030 103464 000000
00010: 000444 017340 000000 033760 001427 000500 006000 103463
00020: 000000 000000 000443 017000 020464 001021 000000 020040
00030: 002000 150265 034001 020470 000000 031460 000000 000100
00040: 027320 031760 000000 135031 000440 017340 033760 000000
00050: 000000 000502 017000 001566 000002 016440 000000 017340
00060: 033760 000000 000503 017000 000000 033760 040000 000445
00070: 017000 031460 000000 000000 000000 000000 000000 000000
00100: SAME: TO 000200-1


*T RECORD 949 (%1665, #3B5)
00000: 036000 060156 141345 002176 000000 000440 017340 113760
00010: 000000 000506 000000 017000 035760 000000 000504 017002
00020: 000000 113164 000000 000443 017140 031460 000000 020510
00030: 150040 005000 020505 020505 000000 014042 001000 031460
00040: 020520 000040 000000 016000 121162 000000 000443 017000
00050: 000000 167577 034001 020506 031460 020524 000000 120040
00060: 006000 031460 020520 000040 000000 016000 031460 020520
00070: 114040 005000 000000 003563 000000 000000 000000 000000
00100: SAME: TO 000200-1


*T RECORD 950 (%1666, #3B6)
00000: 036000 060156 010604 002254 000000 000000 000510 017000
00010: 001570 001250 000000 000440 017340 113163 000000 000446
00020: 000000 017000 031565 000000 000500 017070 000000 103463
00030: 000000 000443 017000 020514 000000 020517 020040 001140
00040: 101460 000000 000000 000440 017340 001563 000000 000500
00050: 000000 017340 031565 000000 000500 017070 000000 103466
00060: 000000 000446 017140 020521 000000 000000 020040 003000
00070: 170731 034001 000000 020524 000000 000000 000000 000000
00100: SAME: TO 000200-1


*T RECORD 951 (%1667, #3B7)
00000: 036000 060156 177052 002332 000000 031460 000000 000500
00010: 015030 031260 000000 000000 000500 015030 031463 000000
00020: 000000 000500 015030 031460 000000 000100 000000 015000
00030: 031760 135031 000440 017360 000000 031760 101366 000440
00040: 017340 033760 000000 000000 000500 017000 031760 101370
00050: 000000 000440 017340 033760 000000 000502 000000 017000
00060: 021760 006000 000440 017030 000000 031463 000000 000440
00070: 017000 031460 000000 020543 000000 000000 000000 000000
00100: SAME: TO 000200-1


*T RECORD 952 (%1670, #3B8)
00000: 036000 060156 130324 002410 000000 114040 005000 003163
00010: 000000 000442 000000 017000 030463 003435 000440 006000
00020: 000000 143533 034001 020542 121660 000000 000000 000500
00030: 017030 030462 003435 000440 000000 006000 031760 144736
00040: 000440 017360 000000 031260 000000 000440 017170 031460
00050: 000000 000000 000040 037150 031760 001000 000000 000440
00060: 017340 033760 000010 000443 000000 017000 031563 000000
00070: 000500 017070 000000 031460 000000 000000 000000 000000
```

```
00100: SAME: TO 000200-1

*T RECORD 953 (%1671, #3B9)
00000: 036000 060156 161527 002466 000000 000000 000040 037170
00010: 031460 000000 000000 000040 011000 033760 000000 000403
00020: 000000 011000 031460 020560 114040 005000 000000 113163
00030: 000000 000446 017000 043260 000000 000000 000443 017000
00040: 017744 034001 000000 020560 030760 000000 000400 011000
00050: 000000 033760 000000 000400 011000 031760 000000 000000
00060: 000400 007030 031760 135027 000000 000440 017300 031460
00070: 000000 000440 000000 007070 000000 000000 000000 000000
00100: SAME: TO 000200-1

*T RECORD 954 (%1672, #3BA)
00000: 036000 060156 036322 002544 000000 041560 001000 000440
00010: 017000 031760 000000 135026 121440 017300 001700 000000
00020: 000000 000440 017070 041260 000000 000040 000000 017030
00030: 031460 020573 150040 005000 000000 031760 000002 000440
00040: 017030 031760 000000 134720 000440 017360 033760 000177
00050: 000000 000440 017000 031760 030007 014440 000000 017740
00060: 060610 034001 020576 041560 000000 000000 014500 017470
00070: 031460 000000 000000 050040 000000 000000 000000 000000
00100: SAME: TO 000200-1

*T RECORD 955 (%1673, #3BB)
00000: 036000 060156 026307 002622 000000 007000 031460 030735
00010: 000040 006000 000000 031460 000000 000040 007000 031460
00020: 000000 030672 000040 006000 033760 134721 000000 000446
00030: 017000 031760 001007 000440 000000 017340 033760 000000
00040: 000500 017000 000000 001566 000002 000440 017340 001560
00050: 000000 000000 000500 017070 037460 000000 000000 000440
00060: 017142 001560 000000 000500 000000 017070 033760 101370
00070: 001440 017000 000000 031460 000000 000000 000000 000000
00100: SAME: TO 000200-1

*T RECORD 956 (%1674, #3BC)
00000: 036000 060156 176551 002700 000000 020471 000040 006000
00010: 012326 024001 000000 020614 033760 101366 005440 017000
00020: 000000 033760 134722 000446 017000 031460 000000 020471
00030: 000040 006000 031760 001007 000000 000440 017340 033760
00040: 000000 000500 000000 017000 033760 134721 000446 017000
00050: 000000 001566 000002 000440 017340 121560 000000 000000
00060: 000500 017070 037460 000000 000000 000440 017142 121560
00070: 000000 000500 000000 007070 000000 000000 000000 000000
00100: SAME: TO 000200-1

*T RECORD 957 (%1675, #3BD)
00000: 003000 060101 111472 002756 000000 026413 000000 000000
00010: SAME: TO 000200-1

*T RECORD 958 (%1676, #3BE)
00000: 002000 120000 120000 000000 000000 000000 000000 000000
00010: SAME: TO 000200-1

*T RECORD 959 (%1677, #3BF)
00000: 025000 020000 066354 077101 045123 052040 006410 000000
00010: SAME: TO 000020-1
00020: 000000 020101 042112 052523 052040 052101 041114 042523
```

234

```
00030: 020040 026440 051101 041510 042514 020074 034067 030066
00040: 031062 027061 031063 032476 020040 020040 020040 020040
00050: 020040 020040 000000 000000 000000 000000 000000 000000
00060: SAME: TO 000200-1


*T RECORD 960 (%1700, #3C0)
00000: 003400 040001 056225 077101 045123 052000 000000 000000
00010: SAME: TO 000200-1


*T RECORD 961 (%1701, #3C1)
00000: 036000 060156 144775 000000 000000 006407 034001 020626
00010: 033760 000002 000000 000443 017000 031760 135412 000440
00020: 000000 017300 021760 000000 000520 017300 000000 033760
00030: 000004 000442 017000 103760 000000 000000 000441 017000
00040: 011461 000000 000000 002440 017176 103461 000000 000441
00050: 000000 017000 111561 000400 000440 017000 000000 031460
00060: 020633 040040 005000 013462 000000 000000 000442 017000
00070: 031460 020632 000000 120040 000000 000000 000000 000000
00100: SAME: TO 000200-1


*T RECORD 962 (%1702, #3C2)
00000: 036000 060156 026346 000056 000000 005000 013463 000000
00010: 000443 017000 000000 031460 020645 020040 005000 031760
00020: 000000 137413 000440 017300 173255 034001 000000 020644
00030: 031460 020630 000040 016000 000000 031460 000000 000040
00040: 007000 031460 000000 000000 000440 017340 033760 000000
00050: 000000 000506 017140 033760 000000 000507 000000 017140
00060: 033760 000000 000511 017000 000000 043260 000000 000445
00070: 017000 033760 000000 000077 000000 000000 000000 000000
00100: SAME: TO 000200-1


*T RECORD 963 (%1703, #3C3)
00000: 036000 060156 126246 000134 000000 000440 017000 033471
00010: 000000 000450 000000 017000 001565 141414 000440 017340
00020: 000000 023760 000000 000502 017000 033760 000000 000400
00030: 000443 017000 013462 000000 000000 000442 017000 031460
00040: 020663 014040 000000 005000 072024 034001 020662 003163
00050: 000000 020660 000450 016000 001166 000000 000000 000445
00060: 017340 031760 000000 000500 000000 017000 031460 020676
00070: 014040 005000 000000 121563 000000 000000 000000 000000
00100: SAME: TO 000200-1


*T RECORD 964 (%1704, #3C4)
00000: 036000 060156 075733 000212 000000 000000 000500 017000
00010: 031460 020676 000000 114040 005000 033760 177700 000442
00020: 000000 017000 033760 000040 000441 017000 000000 001570
00030: 000000 000500 017340 001561 000000 000000 000500 017030
00040: 041562 000000 000000 000500 017030 031760 000000 001500
00050: 000000 017036 001167 000000 000445 017360 000000 103465
00060: 000000 000445 017000 101331 000000 034001 020700 111565
00070: 000004 000440 000000 017000 000000 000000 000000 000000
00100: SAME: TO 000200-1


*T RECORD 965 (%1705, #3C5)
00000: 036000 060156 151350 000270 000000 020653 000000 020040
00010: 003000 043260 000000 000000 005443 017000 033760 000004
00020: 000000 000447 017000 033760 000400 000444 000000 017000
00030: 103760 000000 006446 017000 000000 001563 135322 000440
```

235

```
00040: 017340 033760 000000 000000 000502 017000 037463 000000
00050: 000000 000445 017002 001565 135326 000440 000000 017340
00060: 103760 000000 000500 017140 000000 103760 020717 000501
00070: 006000 103463 000000 000000 000000 000000 000000 000000
00100: SAME: TO 000200-1

*T RECORD 966 (%1706, #3C6)
00000: 036000 060156 163513 000346 000000 001443 017000 121163
00010: 000000 000447 000000 017000 024330 034001 020716 020736
00020: 000000 020705 014040 001000 031760 032400 000000 000440
00030: 017340 121160 000000 000446 000000 017000 031460 020727
00040: 020040 005000 000000 121164 000000 000446 017000 020725
00050: 000000 020735 014041 001000 041260 000000 000000 000440
00060: 017070 103466 000000 000446 000000 017140 020720 020722
00070: 054040 001000 000000 031460 000000 000000 000000 000000
00100: SAME: TO 000200-1

*T RECORD 967 (%1707, #3C7)
00000: 036000 060156 075107 000424 000000 020731 150040 005000
00010: 031562 020732 000000 000500 016070 031462 000000 000440
00020: 000000 017070 103466 000000 000446 017140 000000 121161
00030: 000000 002446 017000 067773 000000 034001 020734 020727
00040: 020722 014040 000000 001000 031460 000000 000040 007000
00050: 000000 033760 000040 000440 037150 031760 000000 001002
00060: 000440 017340 031560 000000 000000 000500 017070 031460
00070: 000000 000040 000000 027170 000000 000000 000000 000000
00100: SAME: TO 000200-1

*T RECORD 968 (%1710, #3C8)
00000: 036000 060156 037730 000502 000000 023760 000400 000441
00010: 017000 041260 000000 000000 000440 017030 001561 032400
00020: 000000 000440 017360 013461 000000 000441 000000 017000
00030: 020736 020744 114040 001000 000000 033760 135075 000440
00040: 017000 031760 000000 134722 000440 017340 101460 000000
00050: 000000 000440 017360 016054 034001 020752 000000 031760
00060: 134721 000440 017340 001560 000000 000003 000440 017360
00070: 031460 025200 000000 000040 000000 000000 000000 000000
00100: SAME: TO 000200-1

*T RECORD 969 (%1711, #3C9)
00000: 036000 060156 047704 000560 000000 006000 031760 135104
00010: 000440 017340 000000 033760 000377 000446 017000 043566
00020: 000000 000000 000502 017000 031760 000000 000000 002500
00030: 017034 043566 000000 000501 000000 017140 043566 000000
00040: 000504 017000 000000 031760 000000 002500 017034 043566
00050: 000000 000000 000503 007000 031460 000000 000000 000440
00060: 017340 033760 000000 000500 000000 017140 023760 000000
00070: 000501 017140 000000 047562 000000 000000 000000 000000
00100: SAME: TO 000200-1

*T RECORD 970 (%1712, #3CA)
00000: 036000 060156 145470 000636 000000 034001 020770 033760
00010: 000000 000502 000000 017140 033760 000000 000503 017000
00020: 000000 033760 000000 000527 017000 031460 000000 000000
00030: 000440 017000 020776 021004 000000 020040 002000 031460
00040: 020777 000040 000000 016000 031460 021022 000040 006000
00050: 000000 101467 000000 000440 017340 013462 000000 000000
00060: 000442 017000 031460 020771 000000 120040 005000 101760
```

```
00070: 000000 000500 000000 017000 000000 000000 000000 000000
00100: SAME: TO 000200-1


*T RECORD 971 (%1713, #3CB)
00000: 036000 060156 100357 000714 000000 020767 000000 020040
00010: 003000 031460 000000 021034 000040 006000 031460 021047
00020: 000000 000040 006000 036045 034001 021006 000000 033760
00030: 000000 000524 017000 001565 000000 135342 000440 017340
00040: 101760 000000 000000 000500 017000 031460 021021 020040
00050: 000000 005000 033760 000000 000505 017140 000000 033760
00060: 000000 000506 017000 021760 000000 000000 000440 017070
00070: 031460 000000 000000 000040 000000 000000 000000 000000
00100: SAME: TO 000200-1


*T RECORD 972 (%1714, #3CC)
00000: 036000 060156 173515 000772 000000 017260 031464 000000
00010: 000440 017300 000000 031465 000000 000440 017070 031466
00020: 000000 000000 000440 017170 031460 000000 000000 000040
00030: 007000 031460 021034 000040 000000 006000 031460 021047
00040: 000040 006000 000000 135347 034001 021024 033760 000000
00050: 000000 000524 017040 033760 000000 000506 000000 017140
00060: 001565 135342 000440 017300 000000 101760 000000 000520
00070: 017360 031466 000000 000000 000000 000000 000000 000000
00100: SAME: TO 000200-1


*T RECORD 973 (%1715, #3CD)
00000: 036000 060156 036136 001050 000000 000440 017270 011464
00010: 000000 000440 000000 017340 031460 000000 000040 017160
00020: 000000 031460 000000 000040 007160 043260 000000 000000
00030: 000444 017000 043260 000000 000000 000445 017000 121164
00040: 000000 000441 000000 017000 031460 021044 020040 005000
00050: 000000 001564 135204 000440 017340 031760 000000 000000
00060: 000500 017340 125761 034001 000000 021042 003565 000000
00070: 000705 017000 000000 103464 000000 000000 000000 000000
00100: SAME: TO 000200-1


*T RECORD 974 (%1716, #3CE)
00000: 036000 060156 054355 001126 000000 021036 000444 016000
00010: 013463 000000 000000 000446 017000 037466 000000 000446
00020: 000000 017002 003166 000000 000445 007000 000000 043260
00030: 000000 000444 017000 001561 000000 135204 000440 017340
00040: 101760 000000 000000 000500 017300 033760 000006 000446
00050: 000000 017000 001566 000000 000520 017300 000000 103464
00060: 000000 000444 017000 121164 000000 000000 000443 017000
00070: 021053 000000 000000 020040 000000 000000 000000 000000
00100: SAME: TO 000200-1


*T RECORD 975 (%1717, #3CF)
00000: 036000 060156 010072 001204 000000 003000 031460 021272
00010: 000040 006000 000000 027303 034001 021060 031760 135204
00020: 000000 000440 017340 101760 000000 000500 000000 017000
00030: 031460 021061 120040 005140 000000 031460 000000 000440
00040: 017270 003560 000000 000003 000452 017000 031460 000000
00050: 000000 000440 017340 033760 000000 000500 000000 017140
00060: 033760 000000 000505 017140 000000 033760 000000 000506
00070: 017140 033465 000000 000000 000000 000000 000000 000000
00100: SAME: TO 000200-1
```

```
*T RECORD 976 (%1720, #3D0)
00000: 036000 060156 166646 001262 000000 000453 017000 033466
00010: 000000 000454 000000 017000 033760 000000 000507 017140
00020: 000000 033760 000000 000510 017100 033760 000000 000000
00030: 000531 017000 055137 034001 000000 021076 031460 000000
00040: 000440 017140 000000 031460 021102 114040 005000 033760
00050: 000000 000120 000456 017000 001576 000000 000000 000500
00060: 017030 031760 135175 000440 000000 017360 031470 000000
00070: 000440 017270 000000 031760 000000 000000 000000 000000
00100: SAME: TO 000200-1

*T RECORD 977 (%1721, #3D1)
00000: 036000 060156 176406 001340 000000 135156 000440 017300
00010: 031467 000000 000000 000440 017070 031471 000000 000440
00020: 000000 017340 031760 000000 000500 017000 000000 031460
00030: 021115 120040 005000 031760 000000 135337 000440 017030
00040: 001572 000004 000000 000440 017360 101760 000000 000500
00050: 000000 017170 022141 034001 021114 033760 000000 135336
00060: 000451 017000 031471 000000 000000 000440 017030 031760
00070: 135202 000440 000000 017360 000000 000000 000000 000000
00100: SAME: TO 000200-1

*T RECORD 978 (%1722, #3D2)
00000: 036000 060156 113753 001416 000000 043260 000000 000447
00010: 017000 041570 000000 001300 000440 017000 031460 021126
00020: 000000 020040 005000 033760 000003 000447 000000 017000
00030: 041570 000200 000440 017000 000000 031460 021126 020040
00040: 005000 033760 000000 000006 000447 017000 001567 135300
00050: 000000 000440 017030 031760 135163 000440 000000 017360
00060: 001567 135311 000440 017030 000000 031760 135170 000440
00070: 017360 044322 000000 034001 000000 000000 000000 000000
00100: SAME: TO 000200-1

*T RECORD 979 (%1723, #3D3)
00000: 036000 060156 102516 001474 000000 021132 031460 000000
00010: 000440 017030 000000 031460 000000 000100 015000 031460
00020: 000000 021147 000040 006000 031460 000000 000000 000040
00030: 011000 033760 000000 000400 000000 017000 003572 000006
00040: 000452 017000 000000 031472 000000 000440 017340 101760
00050: 000000 000000 000500 017000 031460 021146 000000 020040
00060: 005000 003565 000046 000445 000000 017000 033760 000046
00070: 000453 017000 000000 043260 000000 000000 000000 000000
00100: SAME: TO 000200-1

*T RECORD 980 (%1724, #3D4)
00000: 036000 060156 166251 001552 000000 021073 000454 016000
00010: 031460 000000 000000 000040 007000 031760 100001 000440
00020: 000000 017030 072604 034001 021150 031760 000000 135151
00030: 000440 017360 031760 135230 000000 000440 017360 031760
00040: 100000 000440 000000 017030 031760 135106 000440 017360
00050: 000000 043260 000000 000444 017000 001564 000000 135120
00060: 000440 017340 101760 000000 000000 000500 017000 031460
00070: 021175 020040 000000 005000 000000 000000 000000 000000
00100: SAME: TO 000200-1

*T RECORD 981 (%1725, #3D5)
00000: 036000 060156 063074 001630 000000 003565 000000 000501
00010: 017140 033760 000000 000000 000502 017140 003566 000000
```

238

```
00020: 000000 000503 017140 031760 135112 000440 000000 017360
00030: 031463 000000 000440 017270 000000 031462 000000 000440
00040: 017270 160614 000000 034001 021166 031461 000000 000440
00050: 000000 017270 033760 135106 000440 017000 000000 031460
00060: 002745 000040 006000 031760 000000 100001 000440 017030
00070: 031760 135106 000000 000440 000000 000000 000000 000000
00100: SAME: TO 000200-1

*T RECORD 982 (%1726, #3D6)
00000: 036000 060156 152710 001706 000000 017360 003564 000004
00010: 000444 017000 000000 031460 021155 000040 016000 033760
00020: 000000 000004 000451 017000 101760 135151 000000 000440
00030: 017340 001573 000000 000500 000000 017070 031460 000000
00040: 000040 017140 000000 001574 000000 000500 017070 001571
00050: 000000 000000 000520 017340 101760 000000 000000 000500
00060: 017000 054670 034001 021204 000000 031460 021177 120040
00070: 005000 033760 000000 135151 000000 000000 000000 000000
00100: SAME: TO 000200-1

*T RECORD 983 (%1727, #3D7)
00000: 036000 060156 061236 001764 000000 000440 017000 031460
00010: 014073 000040 000000 006000 031460 000000 000040 007000
00020: 000000 031460 021272 000040 006000 031760 000000 000057
00030: 000440 017030 031460 021324 000000 000040 006000 033760
00040: 000003 000451 000000 017000 031760 135170 000440 017300
00050: 000000 121571 000000 000520 017300 031760 000000 000037
00060: 000440 017070 031760 135170 000000 000440 017300 101760
00070: 000000 000520 000000 017340 000000 000000 000000 000000
00100: SAME: TO 000200-1

*T RECORD 984 (%1730, #3D8)
00000: 036000 060156 117635 002042 000000 033760 000000 000513
00010: 017000 065043 000000 034001 021222 021760 000000 000440
00020: 000000 017070 031460 021233 000040 006000 000000 031760
00030: 135170 000440 017300 101760 000000 000000 000520 017300
00040: 031473 000000 000000 000440 017070 033760 000003 000451
00050: 000000 017000 031760 135170 000440 017300 000000 031760
00060: 000054 000440 017030 121571 000000 000000 000520 007360
00070: 003560 000003 000000 000452 000000 000000 000000 000000
00100: SAME: TO 000200-1

*T RECORD 985 (%1731, #3D9)
00000: 036000 060156 142173 002120 000000 017000 101460 000000
00010: 000440 017340 000000 033760 000000 000505 017140 033760
00020: 000000 000000 000506 017140 033760 000000 000000 000507
00030: 017140 004640 034001 021240 000000 033760 000000 000510
00040: 017000 033465 000000 000000 000453 017000 033466 000000
00050: 000000 000454 017000 031467 000000 000440 000000 017030
00060: 031760 135156 000440 017360 000000 041570 001300 000440
00070: 017000 043260 000000 021253 000000 000000 000000 000000
00100: SAME: TO 000200-1

*T RECORD 986 (%1732, #3DA)
00000: 036000 060156 165552 002176 000000 020447 005000 033760
00010: 000003 000447 000000 017000 041570 000200 000440 017000
00020: 000000 031460 021253 020040 005000 033760 000000 000006
00030: 000447 017000 001567 135300 000000 000440 017030 031760
00040: 135163 000440 000000 017360 001567 135311 000440 017030
```

239

```
00050: 000000 155765 034001 021256 031760 135170 000000 000440
00060: 017360 031460 021147 000040 000000 006000 003572 000002
00070: 000452 017000 000000 031472 000000 000000 000000 000000
00100: SAME: TO 000200-1


*T RECORD 987 (%1733, #3DB)
00000: 036000 060156 077520 002254 000000 000000 000440 017340
00010: 101760 000000 000000 000500 017000 031460 021271 020040
00020: 000000 005000 003565 000046 000445 017000 000000 033760
00030: 000046 000453 017000 043260 000000 000000 000454 017000
00040: 033760 000000 000000 000507 017140 033760 021243 000510
00050: 000000 016000 031460 000000 000040 007000 000000 101760
00060: 135151 000440 017300 031760 000000 000005 000440 017070
00070: 153033 034001 000000 021274 000000 000000 000000 000000
00100: SAME: TO 000200-1


*T RECORD 988 (%1734, #3DC)
00000: 036000 060156 116303 002332 000000 031760 000003 000440
00010: 017170 031760 000000 135156 000440 017300 041260 000000
00020: 000000 000440 017070 031760 000002 000440 000000 017170
00030: 031760 000022 000440 017170 000000 033760 000004 000451
00040: 017000 001571 000000 000000 000520 017300 031760 000002
00050: 000000 000440 017070 031760 000054 000440 000000 017170
00060: 001571 000000 000520 017300 000000 031760 000002 000440
00070: 017070 031760 000000 000037 000000 000000 000000 000000
00100: SAME: TO 000200-1


*T RECORD 989 (%1735, #3DD)
00000: 036000 060156 135235 002410 000000 000440 017170 033760
00010: 000002 000451 000000 017000 001571 000000 000520 017300
00020: 000000 172163 034001 021312 041260 000000 000000 000440
00030: 017070 033760 000034 000451 000000 017160 001571 000002
00040: 000440 017170 000000 031760 000037 000440 017170 031760
00050: 000000 000377 000440 017030 031760 135113 000000 000440
00060: 017360 031460 000001 000240 000000 017160 031760 000073
00070: 000440 017030 000000 031460 000000 000000 000000 000000
00100: SAME: TO 000200-1


*T RECORD 990 (%1736, #3DE)
00000: 036000 060156 036253 002466 000000 021324 000040 006000
00010: 031460 000000 000000 000040 007000 031760 135123 000440
00020: 000000 017360 031760 135143 000440 017360 000000 031760
00030: 135147 000440 017360 031760 000000 135132 000440 017300
00040: 034002 034001 000000 021330 021760 000000 000500 007070
00050: 000000 043260 000000 000451 017000 001571 000000 135204
00060: 000440 017340 101760 000000 000000 000500 017000 031460
00070: 021343 020040 000000 005000 000000 000000 000000 000000
00100: SAME: TO 000200-1


*T RECORD 991 (%1737, #3DF)
00000: 036000 060156 057604 002544 000000 031760 000000 000500
00010: 017340 033760 000000 000377 000440 017000 041560 000000
00020: 000000 000500 017030 031460 021371 000040 000000 006000
00030: 031460 002745 000040 006000 000000 103471 021332 000451
00040: 016000 031760 000000 130477 000440 017340 031760 000000
00050: 000000 000500 017000 031460 021347 020040 000000 006000
00060: 012660 034001 021346 031460 000000 000000 000040 007000
00070: 031760 135204 000000 000440 000000 000000 000000 000000
```

```
00100: SAME: TO 000200-1

*T RECORD 992 (%1740, #3E0)
00000: 036000 060156 007004 002622 000000 017340 101760 000000
00010: 000500 017000 000000 031460 021354 020040 005000 021760
00020: 000000 000000 000440 017070 031460 021350 000000 000040
00030: 016140 031760 135342 000440 000000 017340 101760 000000
00040: 000500 017000 000000 031460 021361 020040 005000 021760
00050: 000000 000000 000440 017070 031460 021355 000000 000040
00060: 016140 031460 000000 000040 000000 007000 031460 000000
00070: 000440 017340 000000 031460 000000 000000 000000 000000
00100: SAME: TO 000200-1

*T RECORD 993 (%1741, #3E1)
00000: 036000 060156 136306 002700 000000 021371 000040 006000
00010: 025347 034001 000000 021364 031760 000057 000440 017030
00020: 000000 033760 000004 000441 017000 001561 000000 135106
00030: 000440 017360 031460 002745 000000 000040 006000 031460
00040: 000000 000040 000000 007000 033760 000000 000501 017140
00050: 000000 033760 000000 000502 017140 033760 000000 000000
00060: 000503 017000 043260 000000 000000 000445 017000 003565
00070: 000046 000445 000000 017000 000000 000000 000000 000000
00100: SAME: TO 000200-1

*T RECORD 994 (%1742, #3E2)
00000: 036000 060156 150654 002756 000000 013461 000000 000441
00010: 017000 031460 000000 021375 120040 005000 103465 000000
00020: 000000 000445 017000 031760 135106 000440 000000 017300
00030: 127646 034001 021402 031760 000000 100014 000440 017070
00040: 031462 000000 000000 000440 017170 031465 000000 000440
00050: 000000 017170 031463 000000 000440 017170 000000 031760
00060: 000073 000440 017170 041260 000000 000001 000640 017170
00070: 033760 135106 000000 000440 000000 000000 000000 000000
00100: SAME: TO 000200-1

*T RECORD 995 (%1743, #3E3)
00000: 036000 060156 167664 003034 000000 017160 031460 000000
00010: 000040 007000 000000 033760 000046 000444 017000 043260
00020: 000000 000000 000451 017000 001571 135204 000000 000440
00030: 017340 101760 000000 000500 000000 017000 031460 021457
00040: 020040 005000 000000 033760 000002 000447 017000 007062
00050: 000000 034001 021420 123567 000000 000510 000000 017000
00060: 031760 000000 000500 017340 000000 033760 000000 000500
00070: 017140 033760 000000 000000 000000 000000 000000 000000
00100: SAME: TO 000200-1

*T RECORD 996 (%1744, #3E4)
00000: 036000 060156 025662 003112 000000 000501 017140 033760
00010: 000000 000502 000000 017000 101760 135230 000440 017340
00020: 000000 001561 000000 000500 017070 031460 000000 000000
00030: 000040 017140 001562 000000 000000 000500 017070 003570
00040: 000006 000450 000000 017000 031470 000000 000440 017340
00050: 000000 033760 000000 000503 017000 001567 000000 000000
00060: 000520 017340 031460 000000 000000 000440 017300 101005
00070: 034001 021436 000000 031460 000000 000000 000000 000000
00100: SAME: TO 000200-1

*T RECORD 997 (%1745, #3E5)
```

241

```
00000: 036000 060156 137743 003170 000000 000000 000120 015000
00010: 031460 000000 000000 000440 017000 031460 021460 014040
00020: 000000 006000 033760 000005 000441 017000 000000 001561
00030: 135230 000440 017360 033760 000000 135230 000440 017000
00040: 031463 014073 000000 000440 006270 031460 000000 000040
00050: 000000 011000 001570 000005 000440 017340 000000 101760
00060: 000000 000500 017000 033760 000000 021453 020400 005000
00070: 101760 135230 000000 000440 000000 000000 000000 000000
00100: SAME: TO 000200-1
```

*T RECORD 998 (%1746, #3E6)
```
00000: 036000 060156 013755 003246 000000 017340 001564 021431
00010: 000500 016070 000000 101760 135230 000440 017300 070230
00020: 000000 034001 021454 031760 000002 000440 000000 017070
00030: 031760 000037 000440 017170 000000 103471 021414 000451
00040: 016000 031460 000000 000000 000040 007000 031462 000000
00050: 000000 000440 017300 031463 000000 000520 000000 015300
00060: 031464 000000 000520 015300 000000 031467 000000 000520
00070: 015300 031470 000000 000000 000000 000000 000000 000000
00100: SAME: TO 000200-1
```

*T RECORD 999 (%1747, #3E7)
```
00000: 036000 060156 135350 003324 000000 000520 015300 031471
00010: 000000 000520 000000 015300 031460 000000 000120 015000
00020: 000000 031460 000000 000100 015000 031760 000000 000000
00030: 000500 017340 033760 000000 000000 000500 017140 174334
00040: 034001 021472 000000 033760 000000 000501 017000 033760
00050: 000000 062000 000442 017000 033760 000016 000000 000443
00060: 017000 031460 015140 000040 000000 006000 033760 000120
00070: 000442 017000 000000 031460 000000 000000 000000 000000
00100: SAME: TO 000200-1
```

*T RECORD 1000 (%1750, #3E8)
```
00000: 036000 060156 040454 003402 000000 000000 000040 011000
00010: 001562 000000 000000 000400 017300 031460 000000 000440
00020: 000000 017070 031461 000000 000440 017170 000000 021760
00030: 000000 000520 011030 033760 000000 000000 000411 011000
00040: 033760 000000 000000 000410 011000 033760 000000 000407
00050: 000000 011000 033760 000000 000404 011000 000000 127267
00060: 034001 021510 033760 000000 000000 000403 011000 033760
00070: 000000 000402 000000 007000 000000 000000 000000 000000
00100: SAME: TO 000200-1
```

*T RECORD 1001 (%1751, #3E9)
```
00000: 036000 060156 007077 003460 000000 031760 000002 000440
00010: 017030 031760 000000 135237 000440 017360 031760 000022
00020: 000000 000440 017030 031760 135245 000440 000000 017360
00030: 023760 000000 000451 017000 000000 103471 000000 000451
00040: 017000 001571 000000 135204 000440 017340 101760 000000
00050: 000000 000500 017000 031460 021560 020040 000000 005000
00060: 031760 000000 000500 017340 000000 033760 000377 000441
00070: 017000 043561 000000 000000 000000 000000 000000 000000
00100: SAME: TO 000200-1
```

*T RECORD 1002 (%1752, #3EA)
```
00000: 036000 060156 125060 003536 000000 000501 017140 075557
00010: 034001 021526 000000 033760 000000 000502 017140 033760
00020: 000000 000000 000503 017000 103760 000000 000000 000445
```

```
00030:  017000 031760 135237 000440 000000 017340 001562 000000
00040:  000500 017070 000000 031460 021622 000040 006000 101260
00050:  000000 000000 006440 017000 021537 021662 000000 120040
00060:  002000 031460 021560 000040 000000 016000 001563 000054
00070:  000440 017030 000000 031460 000000 000000 000000 000000
00100:  SAME: TO 000200-1
```

*T RECORD 1003 (%1753, #3EB)
```
00000:  036000 060156 041033 003614 000000 021644 000040 006000
00010:  101260 000000 000000 002440 017000 021544 021662 120040
00020:  000000 002000 031460 021560 000040 016000 000000 121335
00030:  034001 021544 103465 000000 000000 000445 017000 031760
00040:  000022 000440 000000 017030 031760 135245 000440 017360
00050:  000000 121161 000000 000445 017000 031460 000000 021555
00060:  014040 005000 031760 135237 000000 000440 017340 033760
00070:  000046 000444 000000 017000 000000 000000 000000 000000
00100:  SAME: TO 000200-1
```

*T RECORD 1004 (%1754, #3EC)
```
00000:  036000 060156 015675 003672 000000 001564 000000 000500
00010:  017070 031460 000000 021533 000040 016000 031760 000002
00020:  000000 000440 017030 031760 135237 000440 000000 017360
00030:  031460 021517 000040 016000 000000 031460 000000 000040
00040:  007000 031460 000000 000000 000440 017340 145070 034001
00050:  000000 021562 033760 000000 000501 017140 000000 033760
00060:  000000 000502 017140 033760 000000 000000 000503 017000
00070:  103760 000000 000000 000445 000000 000000 000000 000000
00100:  SAME: TO 000200-1
```

*T RECORD 1005 (%1755, #3ED)
```
00000:  036000 060156 043461 003750 000000 017000 031760 135245
00010:  000440 017300 000000 031760 000022 000440 017070 031760
00020:  000000 135237 000440 017300 001562 000002 000000 000440
00030:  017070 031460 021622 000040 000000 006000 101260 000000
00040:  006440 017000 000000 031460 021577 050040 005000 021601
00050:  000000 022041 120040 002000 031460 021621 000000 000040
00060:  016000 021601 022017 120040 000000 002000 067673 034001
00070:  021600 031460 000000 021621 000000 000000 000000 000000
00100:  SAME: TO 000200-1
```

*T RECORD 1006 (%1756, #3EE)
```
00000:  036000 060156 177436 004026 000000 000040 016000 001563
00010:  000037 000440 000000 017030 031460 021644 000040 006000
00020:  000000 101260 000000 002440 017000 031460 000000 021607
00030:  050040 005000 021611 022041 000000 120040 002000 031460
00040:  021621 000040 000000 016000 021611 022017 120040 002000
00050:  000000 031460 021621 000040 016000 103465 000000 000000
00060:  000445 017000 121161 000000 000000 000445 017000 031460
00070:  021621 014040 000000 005000 000000 000000 000000 000000
00100:  SAME: TO 000200-1
```

*T RECORD 1007 (%1757, #3EF)
```
00000:  036000 060156 064523 004104 000000 031760 000022 000440
00010:  017030 031760 000000 135245 000440 017360 071272 034001
00020:  000000 021616 031760 135237 000440 017340 000000 033760
00030:  000046 000444 017000 001564 000000 021572 000500 016070
00040:  031460 000000 000000 000040 007000 033760 000033 000444
00050:  000000 017000 001564 000000 000500 017170 000000 031760
```

```
00060: 135245 000440 017340 001563 000000 000000 000500 017070
00070: 033760 000013 000000 000444 000000 000000 000000 000000
00100: SAME: TO 000200-1

*T RECORD 1008 (%1760, #3F0)
00000: 036000 060156 040632 004162 000000 017000 001564 000000
00010: 000500 017170 000000 031461 000000 000440 017030 031463
00020: 000000 000000 000500 015030 031471 000000 000000 000500
00030: 015030 031460 000000 000100 000000 015000 071050 034001
00040: 021634 031460 000000 000000 000020 015000 033760 135237
00050: 000000 000440 017000 031460 022135 000040 000000 006000
00060: 031460 000000 000040 011000 000000 031760 000000 003400
00070: 011010 033760 000000 000000 000000 000000 000000 000000
00100: SAME: TO 000200-1

*T RECORD 1009 (%1761, #3F1)
00000: 036000 060156 027256 004240 000000 000411 011000 033760
00010: 000000 000403 000000 011000 033760 000000 000401 007000
00020: 000000 031760 135245 000440 017360 001564 000000 000000
00030: 000500 017170 031461 000000 000000 000440 017030 031463
00040: 000000 000500 000000 015030 031471 000000 000500 015030
00050: 000000 031460 000000 000100 015000 142043 000000 034001
00060: 021652 031460 000000 000020 000000 015000 033760 135237
00070: 000440 017000 000000 031460 000000 000000 000000 000000
00100: SAME: TO 000200-1

*T RECORD 1010 (%1762, #3F2)
00000: 036000 060156 136153 004316 000000 022135 000040 006000
00010: 031460 000000 000000 000040 011000 031760 000000 003400
00020: 000000 011010 033760 000000 000411 011000 000000 033760
00030: 000000 000403 011000 033760 000000 000000 000401 007000
00040: 031260 000000 000000 000440 017030 031465 000000 000500
00050: 000000 015030 031471 000000 000500 015030 000000 031460
00060: 000000 000100 015000 001571 000000 135204 000440 017340
00070: 113760 000002 000000 000450 000000 000000 000000 000000
00100: SAME: TO 000200-1

*T RECORD 1011 (%1763, #3F3)
00000: 036000 060156 112660 004374 000000 017000 023370 034001
00010: 021670 001570 000000 000000 000500 017300 033760 000006
00020: 000000 000447 017000 001567 000000 000520 000000 017300
00030: 013465 000000 000445 017000 000000 003167 021672 120450
00040: 005000 031460 000000 000000 000040 017040 033760 000000
00050: 000000 000501 017140 031460 000000 000040 000000 017140
00060: 033760 000000 000502 017140 000000 033760 000000 000503
00070: 017140 033760 000000 000000 000000 000000 000000 000000
00100: SAME: TO 000200-1

*T RECORD 1012 (%1764, #3F4)
00000: 036000 060156 111661 004452 000000 000504 017000 031463
00010: 000000 000440 000000 017340 033760 000000 000503 017140
00020: 000000 033760 000000 000505 017000 150214 000000 034001
00030: 021706 031464 000000 000440 000000 017340 033760 000000
00040: 000504 017140 000000 033760 000000 000506 017000 041561
00050: 000000 001300 000440 017000 021714 021722 000000 020040
00060: 002000 031460 021715 000040 000000 016000 031460 021735
00070: 000040 006000 000000 031460 000000 000000 000000 000000
00100: SAME: TO 000200-1
```

```
*T RECORD 1013 (%1765, #3F5)
00000: 036000 060156 113163 004530 000000 021412 000040 006000
00010: 031460 000000 000000 000040 011000 033760 000000 000411
00020: 000000 011000 033760 000000 000405 011000 000000 030760
00030: 000000 000400 007000 001660 000000 135253 000440 017340
00040: 033760 021725 000000 154506 005000 064413 034001 021724
00050: 000000 123466 000000 000446 017000 031462 000000 000000
00060: 000440 017340 001566 000000 000000 000500 017030 121563
00070: 000000 000500 000000 017000 000000 000000 000000 000000
00100: SAME: TO 000200-1

*T RECORD 1014 (%1766, #3F6)
00000: 036000 060156 121623 004606 000000 033463 021734 014452
00010: 005000 111564 000000 000000 000500 017000 033464 021734
00020: 000000 014452 005000 033760 000000 000512 000000 007060
00030: 031472 000000 000440 007070 000000 037260 000000 000447
00040: 017002 030467 000000 000000 000440 017000 031760 135277
00050: 000000 000440 017340 033760 021742 154507 000000 005000
00060: 003567 000010 000447 017000 000000 077244 034001 021742
00070: 001067 000000 000000 000440 000000 000000 000000 000000
00100: SAME: TO 000200-1

*T RECORD 1015 (%1767, #3F7)
00000: 036000 060156 056651 004664 000000 017340 033760 000000
00010: 000500 017140 000000 033760 000000 000501 017000 033462
00020: 000000 000000 000450 017300 033463 000000 000000 000451
00030: 017040 033760 000000 000502 000000 017140 033760 000000
00040: 000503 017000 000000 031464 000000 000440 017030 031466
00050: 000000 000000 000500 015030 031465 000000 000000 000500
00060: 015030 031460 000000 000100 000000 015000 031460 015024
00070: 000040 006000 000000 031460 000000 000000 000000 000000
00100: SAME: TO 000200-1

*T RECORD 1016 (%1770, #3F8)
00000: 036000 060156 114660 004742 000000 000000 000040 011000
00010: 033760 000000 000000 000405 017000 101725 034001 021760
00020: 000000 033460 000000 000452 017000 033461 000000 000000
00030: 000453 017000 033471 000000 000000 000442 017000 033465
00040: 000000 000443 000000 017000 031462 000000 000440 017030
00050: 000000 031463 000000 000500 015030 031460 000000 000000
00060: 000100 015000 031460 015027 000000 000040 006000 031460
00070: 000000 000040 000000 011000 000000 000000 000000 000000
00100: SAME: TO 000200-1

*T RECORD 1017 (%1771, #3F9)
00000: 036000 060156 012612 005020 000000 033760 000000 000403
00010: 011000 033760 000000 000000 000402 011000 033760 000000
00020: 000000 000406 011000 031460 000000 000440 000000 017000
00030: 033760 022014 014404 005000 000000 136240 034001 021776
00040: 033472 000000 000000 000440 017000 033473 000000 000441
00050: 000000 017000 033464 000000 000442 017000 000000 033466
00060: 000000 000443 017000 031462 000000 000000 000440 017030
00070: 031463 000000 000000 000500 000000 000000 000000 000000
00100: SAME: TO 000200-1

*T RECORD 1018 (%1772, #3FA)
00000: 036000 060156 041102 005076 000000 015030 031460 000000
```

245

```
00010: 000100 015000 000000 031460 015027 000040 006000 031460
00020: 000000 000000 000040 011000 033760 000000 000000 000403
00030: 011000 031460 000000 000440 000000 017000 033760 022014
00040: 114402 005000 000000 033472 000000 000442 017000 033473
00050: 000000 000000 000443 017000 051572 034001 000000 022014
00060: 031470 000000 000440 017300 000000 031462 000000 000440
00070: 017070 031463 000000 000000 000000 000000 000000 000000
00100: SAME: TO 000200-1

*T RECORD 1019 (%1773, #3FB)
00000: 036000 060156 166400 005154 000000 000440 007170 033760
00010: 000006 000447 000000 017000 011465 000000 000440 017000
00020: 000000 043260 022023 020451 005000 003567 000000 000006
00030: 000447 017000 001571 135204 000000 000440 017340 101760
00040: 000000 000500 000000 017000 031460 022037 020040 005000
00050: 000000 001567 000000 000500 017340 033760 000000 000000
00060: 000502 017140 033760 000000 000000 000503 017140 033760
00070: 000000 000504 000000 017000 000000 000000 000000 000000
00100: SAME: TO 000200-1

*T RECORD 1020 (%1774, #3FC)
00000: 036000 060156 005166 005232 000000 077407 034001 022032
00010: 031463 000000 000000 000440 017340 033760 000000 000503
00020: 000000 017000 031464 000000 000440 017340 000000 033760
00030: 021722 000504 006000 103471 000000 022023 000451 016000
00040: 031460 021412 000000 000040 006000 031460 000000 000040
00050: 000000 007000 031760 130477 000440 017340 000000 043260
00060: 000000 000451 017000 031760 000000 000000 000500 017000
00070: 031465 000000 000000 000040 000000 000000 000000 000000
00100: SAME: TO 000200-1

*T RECORD 1021 (%1775, #3FD)
00000: 036000 060156 033631 005310 000000 017030 031460 022047
00010: 020040 005000 000000 013465 000000 000451 017000 031460
00020: 000000 000000 000100 015000 005703 034001 000000 022050
00030: 001571 135204 000440 017340 000000 101760 000000 000500
00040: 017000 031460 000000 022116 020040 005000 031471 000000
00050: 000000 000440 017300 031460 000000 000120 000000 015000
00060: 023760 000004 000441 017000 000000 001561 000000 000500
00070: 017300 031460 000000 000000 000000 000000 000000 000000
00100: SAME: TO 000200-1

*T RECORD 1022 (%1776, #3FE)
00000: 036000 060156 002276 005366 000000 000040 017140 033760
00010: 000000 000527 000000 017000 033760 000000 000501 017140
00020: 000000 031460 000000 000040 017140 033760 000000 000000
00030: 000502 017140 033760 000000 000000 000503 017140 033760
00040: 000000 000504 000000 017000 105243 034001 022066 031463
00050: 000000 000000 000440 017340 033760 000000 000000 000503
00060: 017140 033760 000000 000505 000000 017000 031464 000000
00070: 000440 017340 000000 033760 000000 000000 000000 000000
00100: SAME: TO 000200-1

*T RECORD 1023 (%1777, #3FF)
00000: 036000 060156 054317 005444 000000 000000 000504 017140
00010: 033760 000000 000000 000506 017000 031260 000000 000440
00020: 000000 017030 031467 000000 000500 015030 000000 031460
00030: 000000 000100 015000 041561 000000 001300 000440 017000
```

```
00040: 022102 021722 000000 020040 002000 031460 022103 000040
00050: 000000 016000 031460 021735 000040 006000 000000 031460
00060: 000000 000040 011000 001653 000000 034001 022104 023760
00070: 000000 000407 000000 011000 000000 000000 000000 000000
00100: SAME: TO 000200-1


*T RECORD 1024 (%2000, #400)
00000: 036000 060156 040216 005522 000000 030760 000000 000400
00010: 017000 001567 000000 000006 000440 017340 101760 000000
00020: 000000 000500 017000 031460 022057 120040 000000 005000
00030: 031460 000000 000040 011000 000000 103760 000000 000411
00040: 017000 031760 000000 130477 000440 017340 031760 000000
00050: 000000 000500 017000 031460 022050 020040 000000 005000
00060: 031260 000000 000440 017030 000000 031460 000000 000100
00070: 015000 031460 000000 021412 000000 000000 000000 000000
00100: SAME: TO 000200-1


*T RECORD 1025 (%2001, #401)
00000: 036000 060156 130473 005600 000000 000040 006000 031460
00010: 000000 000040 000000 011000 102571 034001 022122 030760
00020: 000000 000000 000400 011000 033760 000000 000000 000405
00030: 007000 031460 000000 005040 000000 017000 031460 021561
00040: 000040 006000 000000 043260 000000 000445 017000 101260
00050: 000000 000000 000440 017000 022133 021512 000000 020040
00060: 002000 101260 000000 000440 000000 017000 031460 022134
00070: 020040 005000 000000 030465 000000 000000 000000 000000
00100: SAME: TO 000200-1


*T RECORD 1026 (%2002, #402)
00000: 036000 060156 152165 005656 000000 000000 000440 017000
00010: 031460 000000 000000 000040 007000 033460 000000 000452
00020: 000000 017000 033760 000002 000446 017000 000000 001566
00030: 134722 000440 017340 020615 000000 034001 022140 033760
00040: 003265 000507 000000 006000 031460 022154 050040 005000
00050: 000000 003572 000006 000452 017000 001566 000000 134721
00060: 000440 017340 033760 003265 000000 000507 006000 031460
00070: 022154 050040 000000 005000 000000 000000 000000 000000
00100: SAME: TO 000200-1


*T RECORD 1027 (%2003, #403)
00000: 036000 060156 015607 005734 000000 113572 000006 000452
00010: 017000 001572 000000 000002 000440 017340 033760 000000
00020: 000000 000500 017000 030474 003435 000440 000000 006000
00030: 001572 000004 000440 017340 000000 000660 000000 000500
00040: 007000 020760 000000 000000 000440 017000 031460 000000
00050: 000000 000040 007000 050476 024001 022156 000000 031460
00060: 000000 000440 017340 033760 000000 000000 000501 017140
00070: 033760 000000 000000 000502 000000 000000 000000 000000
00100: SAME: TO 000200-1


*T RECORD 1028 (%2004, #404)
00000: 036000 060156 175411 006012 000000 017140 033760 000000
00010: 000503 017000 000000 031760 135245 000440 017300 031760
00020: 000000 000022 000440 017070 031760 135237 000000 000440
00030: 017300 001562 000002 000440 000000 017070 031460 021622
00040: 000040 006000 000000 031460 000000 000040 007000 132460
00050: 000000 034000 135075 100017 000000 000001 000000 000000
00060: 000001 000000 135104 000000 000000 000000 000000 000000
```

```
00070:  SAME: TO 000200-1

*T RECORD 1029 (%2005, #405)
00000:  036000 060156 152437 006070 000000 000377 000377 000377
00010:  000377 177777 000000 000000 000047 000000 000073 000000
00020:  000000 000047 000000 000001 000000 000047 000000 000072
00030:  000001 000000 000047 000017 000000 000001 000000 000001
00040:  000000 000073 000000 000046 000001 000000 000073 177777
00050:  000000 000000 000005 000003 000001 000004 000000 000000
00060:  000002 000022 000000 000005 000000 135300 000002 132465
00070:  034000 135165 000000 000054 000000 000000 000000 000000
00100:  SAME: TO 000200-1

*T RECORD 1030 (%2006, #406)
00000:  036000 060156 024062 006146 000000 000000 000005 135311
00010:  000002 000037 000000 000001 000000 000000 000036 000037
00020:  000000 000001 000001 000000 177777 177777 000000 177777
00030:  177777 177777 177777 177777 000000 177777 177777 177777
00040:  177777 177777 000000 177777 177777 177777 177777 177777
00050:  000000 177777 177777 177777 177777 000000 000000 000002
00060:  000037 000001 000000 000000 000000 177777 000002 000035
00070:  000004 000000 000000 000000 000000 000000 000000 000000
00100:  SAME: TO 000200-1

*T RECORD 1031 (%2007, #407)
00000:  036000 060156 075702 006224 000000 000000 000022 000015
00010:  000001 000000 000000 000000 000000 000000 000144 073203
00020:  000000 034000 135255 000012 000001 050000 000000 000010
00030:  040000 000002 000000 000000 000000 063146 063373 130000
00040:  000010 100000 000000 000000 000000 000000 114631 115373
00050:  000000 135257 020053 025453 020040 025453 000000 020053
00060:  020040 025440 025453 020040 000000 020055 026455 020040
00070:  026455 020055 000000 020040 000000 000000 000000 000000
00100:  SAME: TO 000200-1

*T RECORD 1032 (%2010, #408)
00000:  036000 060156 107651 006302 000000 026440 026455 020040
00010:  000001 000002 000000 000004 000010 000000 000000 000000
00020:  000000 000000 000000 000000 000000 000000 000000 073000
00030:  000000 000377 000000 177777 000000 177777 177777 050461
00040:  022400 135345 000000 177777 177777 177777 177777 177777
00050:  000000 177777 177777 177777 177777 177777 000000 177777
00060:  177777 177777 177777 177777 000000 177777 177777 177777
00070:  177777 177777 000000 177777 000000 000000 000000 000000
00100:  SAME: TO 000200-1

*T RECORD 1033 (%2011, #409)
00000:  020400 060130 131044 006360 000000 177777 177777 177777
00010:  177777 177777 000000 177777 177777 177777 177777 177777
00020:  000000 177777 177777 177777 177777 177777 000000 177777
00030:  135300 002000 141414 000001 000000 000002 000003 000004
00040:  141426 000000 000000 000000 000000 000000 000000 000000
00050:  SAME: TO 000200-1

*T RECORD 1034 (%2012, #40A)
00000:  002000 120000 120000 000000 000000 000000 000000 000000
00010:  SAME: TO 000200-1
```

248

```
*T RECORD 1035 (%2013, #40B)
00000: 025000 020000 073772 077103 051115 047040 002543 000000
00010: SAME: TO 000020-1
00020: 000000 020103 052522 051517 051040 046505 047125 020040
00030: 020122 040503 044105 046040 036070 034060 033060 033456
00040: 030464 032465 037040 020040 020040 020040 020040 020040
00050: 020040 020040 000000 000000 000000 000000 000000 000000
00060: SAME: TO 000200-1


*T RECORD 1036 (%2014, #40C)
00000: 003400 040001 057221 077103 051115 047000 000000 000000
00010: SAME: TO 000200-1


*T RECORD 1037 (%2015, #40D)
00000: 036000 060156 002335 000000 000000 002542 034001 022170
00010: 031760 145652 000000 000440 017340 031760 000000 000500
00020: 000000 017000 031460 000000 021040 017000 000000 031460
00030: 022175 000040 006000 031460 000000 000000 000040 007000
00040: 031760 141433 000000 000440 017340 103760 022210 050525
00050: 000000 005000 031460 022620 000040 006000 000000 031460
00060: 000000 000440 017340 033760 000000 000000 000500 017000
00070: 103760 000000 000000 000525 000000 000000 000000 000000
00100: SAME: TO 000200-1


*T RECORD 1038 (%2016, #40E)
00000: 036000 060156 115516 000056 000000 017000 031760 101373
00010: 000440 017340 000000 031760 000000 006500 017000 031460
00020: 000000 022211 114040 005000 132400 034001 000000 022206
00030: 031760 141433 000440 017340 000000 103760 000000 000525
00040: 017000 033760 000000 000000 002500 017000 031760 141441
00050: 000000 000440 017340 101760 000000 000500 000000 017070
00060: 121560 000000 000500 017000 000000 031460 022216 120040
00070: 005000 041260 000000 000000 000000 000000 000000 000000
00100: SAME: TO 000200-1


*T RECORD 1039 (%2017, #40F)
00000: 036000 060156 054134 000134 000000 000440 017070 033760
00010: 022577 000502 000000 006000 001165 000000 000442 017340
00020: 000000 121660 000000 000500 017030 031760 000000 101362
00030: 000440 017360 033760 077777 000000 000443 017000 041563
00040: 000000 000500 000000 017030 100024 034001 022224 033760
00050: 000000 000003 000445 017000 121565 000000 000000 000500
00060: 017000 033760 000052 000046 000000 017000 121566 022231
00070: 020500 005000 000000 033466 000000 000000 000000 000000
00100: SAME: TO 000200-1


*T RECORD 1040 (%2020, #410)
00000: 036000 060156 051547 000212 000000 022251 120445 005000
00010: 033760 074476 000000 000443 017000 013465 000000 000445
00020: 000000 017000 003165 000000 000443 017340 000000 033760
00030: 000000 000505 017000 031760 000000 145703 000440 017340
00040: 033760 001000 000000 000446 017000 033760 003000 000447
00050: 000000 017000 121566 000000 000500 017000 000000 121567
00060: 022243 020500 005000 117474 000000 034001 022242 043260
00070: 022246 120444 000000 005000 000000 000000 000000 000000
00100: SAME: TO 000200-1


*T RECORD 1041 (%2021, #411)
```

249

```
00000: 036000 060156 167564 000270 000000 043565 000003 000444
00010: 017000 031460 000000 022246 120040 005000 033760 000001
00020: 000000 000444 017000 031463 000000 000440 000000 017300
00030: 041565 000174 000440 017030 000000 031564 022306 000500
00040: 016070 033760 000000 000004 000443 017000 121563 000000
00050: 000000 000500 017000 033760 000054 000044 000000 017000
00060: 121564 022256 020500 005000 000000 033464 022306 120443
00070: 005000 033760 000000 000100 000000 000000 000000 000000
00100: SAME: TO 000200-1

*T RECORD 1042 (%2022, #412)
00000: 036000 060156 135112 000346 000000 000444 017000 031760
00010: 142655 000440 000000 017340 001053 034001 022260 031760
00020: 000000 000000 000500 017000 031460 022267 000000 020040
00030: 005000 033760 040200 000444 000000 017000 031760 142656
00040: 000440 017340 000000 031760 000000 000500 017000 031460
00050: 000000 022267 020040 005000 033760 100200 000000 000444
00060: 017000 031760 145703 000440 000000 017340 033760 000000
00070: 000517 017000 000000 013463 000000 000000 000000 000000
00100: SAME: TO 000200-1

*T RECORD 1043 (%2023, #413)
00000: 036000 060156 160247 000424 000000 000000 000443 017000
00010: 001563 074402 000000 000440 017340 033760 037477 000443
00020: 000000 017000 041563 000000 000500 017030 000000 031564
00030: 000000 000500 017070 166652 000000 034001 022276 111577
00040: 001000 000440 000000 017000 031460 022304 020040 005000
00050: 000000 111577 003400 000440 017000 031460 000000 022304
00060: 020040 005000 111577 003000 000000 000440 017000 031460
00070: 022306 120040 000000 005000 000000 000000 000000 000000
00100: SAME: TO 000200-1

*T RECORD 1044 (%2024, #414)
00000: 036000 060156 035540 000502 000000 033760 177776 000444
00010: 017000 041564 000000 000000 000500 017070 023760 000000
00020: 000000 000443 017000 103463 000000 000443 000000 017000
00030: 121163 000000 000440 017000 000000 031460 022326 020040
00040: 005000 001563 000000 141420 000440 017340 033760 000000
00050: 000000 000504 017000 075260 034001 022314 000000 121163
00060: 000000 000442 017000 041260 000000 022317 020440 005030
00070: 101760 000000 000000 000440 000000 000000 000000 000000
00100: SAME: TO 000200-1

*T RECORD 1045 (%2025, #415)
00000: 036000 060156 104446 000560 000000 017030 031460 022322
00010: 050040 005000 000000 003564 141546 000445 017000 033760
00020: 000000 022323 154506 005000 003564 141567 000000 000445
00030: 017000 031465 000000 000440 000000 017300 031466 000000
00040: 000440 017030 000000 031460 022307 000040 016060 031460
00050: 000000 022330 000040 006000 031460 000000 000000 000040
00060: 007000 031760 144734 000440 000000 017340 031760 000000
00070: 000500 017000 000000 011270 000000 000000 000000 000000
00100: SAME: TO 000200-1

*T RECORD 1046 (%2026, #416)
00000: 036000 060156 124557 000636 000000 034001 022332 043260
00010: 022341 020444 000000 005000 033760 000020 000444 017000
00020: 000000 033760 000007 000443 017000 001563 000000 133777
```

```
00030: 000440 017340 101760 000000 000000 000500 017000 031460
00040: 022341 120040 000000 005000 033760 000040 000444 017000
00050: 000000 031760 074402 000440 017340 033760 000000 177717
00060: 000443 017000 041563 000000 000000 000500 015030 033564
00070: 000000 000503 000000 011070 000000 000000 000000 000000
00100: SAME: TO 000200-1


*T RECORD 1047 (%2027, #417)
00000: 036000 060156 014137 000714 000000 111563 000000 000400
00010: 017000 031760 000000 101416 000040 017340 031760 022353
00020: 000000 020500 005000 015756 034001 022350 000000 031460
00030: 022353 120040 005000 031760 000000 100001 000440 017030
00040: 031760 101362 000000 000440 017360 041260 022372 150440
00050: 000000 005030 031760 144734 000440 017360 000000 031760
00060: 144735 000440 017360 031760 000000 074402 000440 017340
00070: 033760 177717 000000 000440 000000 000000 000000 000000
00100: SAME: TO 000200-1


*T RECORD 1048 (%2030, #418)
00000: 036000 060156 051003 000772 000000 017000 041560 000000
00010: 000500 017070 000000 031760 074476 000440 017340 041560
00020: 000000 000000 000500 017070 033760 037477 000000 000440
00030: 017000 021760 142647 000440 000000 017300 033760 037477
00040: 000440 017000 000000 036275 034001 022366 021760 142647
00050: 000000 000440 017300 031460 000003 000640 000000 017170
00060: 033760 000004 000441 017000 000000 031460 022375 000040
00070: 016000 043260 000000 000000 000000 000000 000000 000000
00100: SAME: TO 000200-1


*T RECORD 1049 (%2031, #419)
00000: 036000 060156 141653 001050 000000 000441 017000 033760
00010: 141454 000040 000000 017000 031460 022376 154040 005000
00020: 000000 033760 141515 000040 017000 031760 000000 074476
00030: 000440 017340 033760 177763 000000 000443 017000 043563
00040: 000000 000503 000000 017000 033161 000000 000443 017000
00050: 000000 121563 000000 000500 017000 031463 000000 022406
00060: 020440 005070 043224 034001 000000 022404 031760 101362
00070: 000440 017300 000000 031760 000000 000000 000000 000000
00100: SAME: TO 000200-1


*T RECORD 1050 (%2032, #41A)
00000: 036000 060156 064547 001126 000000 100001 000440 017070
00010: 031460 022415 000000 000040 006000 031460 022412 050040
00020: 000000 005000 033760 141546 000440 017000 000000 031460
00030: 022413 154040 005000 033760 000000 141567 000440 017000
00040: 031460 014073 000000 000040 006000 031460 000000 000040
00050: 000000 007000 031760 100014 000440 017030 000000 031760
00060: 141442 000440 017360 043260 000000 000000 000444 017000
00070: 031760 141446 000000 000440 000000 000000 000000 000000
00100: SAME: TO 000200-1


*T RECORD 1051 (%2033, #41B)
00000: 036000 060156 107321 001204 000000 017300 041260 000002
00010: 000640 017170 000000 133743 034001 022422 001160 000000
00020: 000000 000444 017340 101760 000000 000500 000000 017000
00030: 022443 022444 120040 002000 000000 031464 000000 000440
00040: 017000 031460 000000 022435 120040 005000 031760 100000
00050: 000000 000440 017030 031760 141442 000440 000000 017360
```

```
00060: 031760 141446 000440 017300 000000 033760 000377 000451
00070: 017000 031471 000000 000002 000000 000000 000000 000000
00100: SAME: TO 000200-1

*T RECORD 1052 (%2034, #41C)
00000: 036000 060156 107253 001262 000000 000640 017170 031460
00010: 022441 000040 000000 016000 111564 000004 000440 017000
00020: 000000 031460 022441 120040 005000 031760 000000 100001
00030: 000440 017030 153454 034001 000000 022440 031760 141442
00040: 000440 017360 000000 003564 000004 000444 017000 031460
00050: 000000 022422 000040 016000 031460 000000 000000 000040
00060: 007000 033760 000000 000501 000000 017140 033760 000000
00070: 000502 017140 000000 033760 000000 000000 000000 000000
00100: SAME: TO 000200-1

*T RECORD 1053 (%2035, #41D)
00000: 036000 060156 120555 001340 000000 000000 000503 017140
00010: 031760 141446 000000 000440 017360 031463 000000 000440
00020: 000000 017270 031462 000000 000440 017270 000000 031461
00030: 000000 000440 017270 031464 000000 000000 000440 017030
00040: 031460 000000 000000 000500 015030 031460 000000 000100
00050: 000000 015000 016756 034001 022456 033760 000000 141442
00060: 000440 017000 031460 002745 000000 000040 006000 031460
00070: 000000 000040 000000 011000 000000 000000 000000 000000
00100: SAME: TO 000200-1

*T RECORD 1054 (%2036, #41E)
00000: 036000 060156 140756 001416 000000 033760 000000 000400
00010: 011000 033760 000000 000000 000404 007000 031760 145652
00020: 000000 000440 017340 031760 000000 000500 000000 017000
00030: 031460 022472 020040 005000 000000 033760 141576 000440
00040: 017000 031760 000000 101373 000440 017340 031760 000000
00050: 000000 000500 017000 031460 022473 114040 000000 005000
00060: 033760 141612 000440 017000 000000 031460 000000 000020
00070: 015000 174053 000000 034001 000000 000000 000000 000000
00100: SAME: TO 000200-1

*T RECORD 1055 (%2037, #41F)
00000: 036000 060156 151630 001474 000000 022474 033760 000002
00010: 000447 017000 000000 001567 134721 000440 017340 033760
00020: 000000 000000 000506 017140 033760 022135 000000 000507
00030: 006000 101260 000000 000440 000000 011000 031760 000000
00040: 023400 007010 000000 101760 134716 000440 017340 031760
00050: 000000 000000 000500 017000 031460 000000 000000 144040
00060: 007000 031760 141441 000440 000000 017300 011260 022170
00070: 000440 006070 000000 040260 000000 000000 000000 000000
00100: SAME: TO 000200-1

*T RECORD 1056 (%2040, #420)
00000: 036000 060156 155606 001552 000000 000000 000440 007000
00010: 031460 000000 000000 000040 037150 031760 101374 000440
00020: 000000 017340 143662 034001 022512 031760 000000 000000
00030: 000500 017000 041260 000000 000000 000040 017070 031460
00040: 022527 120040 000000 025170 031760 145652 000440 017340
00050: 000000 031760 000000 000500 017000 031460 000000 022526
00060: 020040 005000 033760 000030 000000 000440 017000 031760
00070: 101416 000440 000000 017340 000000 000000 000000 000000
00100: SAME: TO 000200-1
```

```
*T RECORD 1057 (%2041, #421)
00000: 036000 060156 173534 001630 000000 121560 000000 000500
00010: 017000 031460 000000 022526 120040 005000 031760 101362
00020: 000000 000440 017300 031760 100001 000440 000000 017070
00030: 031460 000000 000040 007000 000000 031460 022573 014040
00040: 006000 046663 000000 034001 022530 033760 141626 000440
00050: 000000 017000 031460 002745 000040 006000 000000 031760
00060: 141441 000440 017300 021760 000000 000000 000440 017070
00070: 031760 145652 000000 000440 000000 000000 000000 000000
00100: SAME: TO 000200-1

*T RECORD 1058 (%2042, #422)
00000: 036000 060156 134037 001706 000000 017340 031760 000000
00010: 000500 017000 000000 031460 022545 021040 005000 031460
00020: 000000 022620 000040 006000 033760 141546 000000 000443
00030: 017000 031760 101373 000440 000000 017340 031760 000000
00040: 000500 017000 000000 031460 000000 016040 017000 031460
00050: 000000 022547 114040 005000 033760 141433 000000 000440
00060: 017000 001221 034001 022546 000000 033760 141567 000443
00070: 017000 031760 000000 101416 000000 000000 000000 000000
00100: SAME: TO 000200-1

*T RECORD 1059 (%2043, #423)
00000: 036000 060156 100764 001764 000000 000440 017340 103760
00010: 000000 000501 000000 017000 033561 100000 000441 017000
00020: 000000 031460 000000 000440 017340 023760 000000 000000
00030: 000500 017000 023760 000000 000000 000442 017000 103462
00040: 000000 000442 000000 017140 033760 000000 000527 017000
00050: 000000 121561 000000 000500 017000 001562 000000 141420
00060: 000040 017340 001563 022564 000000 020500 005300 101760
00070: 000000 000440 000000 017070 000000 000000 000000 000000
00100: SAME: TO 000200-1

*T RECORD 1060 (%2044, #424)
00000: 036000 060156 160476 002042 000000 031460 022567 000040
00010: 016000 104507 000000 034001 022564 041260 000000 000440
00020: 000000 017070 031760 141441 000440 017300 000000 031462
00030: 000000 000440 017070 031467 000000 000000 000440 017300
00040: 121160 000000 000000 000442 017000 022555 022330 020040
00050: 000000 002000 031460 000000 000040 007000 000000 031760
00060: 000001 000440 017030 031760 000000 101364 000440 017360
00070: 031460 030735 000000 001040 000000 000000 000000 000000
00100: SAME: TO 000200-1

*T RECORD 1061 (%2045, #425)
00000: 036000 060156 024237 002120 000000 006000 031460 000000
00010: 000040 007000 000000 040260 000000 000440 017000 001165
00020: 000000 000000 000442 017340 031760 101416 000000 000440
00030: 017340 166464 034001 022602 000000 103760 000000 000503
00040: 017000 033563 000000 100000 000443 017000 033760 000002
00050: 000000 000447 017000 031760 141423 000440 000000 017340
00060: 033760 000000 000504 017140 000000 013467 000000 000447
00070: 017000 031460 000000 022616 000000 000000 000000 000000
00100: SAME: TO 000200-1

*T RECORD 1062 (%2046, #426)
00000: 036000 060156 137142 002176 000000 014040 005000 111563
```

```
00010: 000000 000500 000000 017000 031460 022617 020040 005000
00020: 000000 013464 000000 000444 017140 031460 000000 022611
00030: 120040 005000 031460 022606 000000 020040 005000 030760
00040: 100000 000440 000000 017000 031460 000000 000040 007000
00050: 000000 017220 022001 022620 031760 145703 000000 000440
00060: 017340 033760 141423 000440 000000 017000 033760 001000
00070: 000446 017000 000000 033760 000000 000000 000000 000000
00100: SAME: TO 000200-1
```

*T RECORD 1063 (%2047, #427)
```
00000: 036000 060156 101403 002254 000000 003000 000447 017000
00010: 121566 000000 000000 000500 017000 121567 022627 020500
00020: 000000 005000 031460 000000 120040 007000 000000 033760
00030: 141427 000440 017000 031460 000000 000000 000040 007000
00040: 004536 034000 000000 141420 000003 000010 000015 000003
00050: 000000 100003 100004 100001 000003 100052 000000 100054
00060: 100001 000001 100001 000003 000000 100003 100004 100001
00070: 177777 000000 000000 000000 000000 000000 000000 000000
00100: SAME: TO 000200-1
```

*T RECORD 1064 (%2050, #428)
```
00000: 036000 060156 041176 002332 000000 000000 000000 000000
00010: 000000 000000 000000 000000 000000 177777 000044 000163
00020: 000000 000561 000017 000034 000173 000561 000000 000017
00030: 000044 000163 000561 000001 000000 000044 000163 000577
00040: 000001 000044 000000 000001 000561 000017 000226 000001
00050: 000000 000561 000017 000160 000001 000561 000000 000017
00060: 150623 034000 141510 000112 000000 000001 000561 000017
00070: 177777 000044 000000 000163 000000 000000 000000 000000
00100: SAME: TO 000200-1
```

*T RECORD 1065 (%2051, #429)
```
00000: 036000 060156 103357 002410 000000 000561 000017 000034
00010: 000173 000561 000000 000017 000160 000046 000561 000001
00020: 000000 000160 000046 000577 000001 000160 000000 000001
00030: 000561 000017 000226 000001 000000 000561 000017 177777
00040: 100001 000046 000000 000563 000001 000005 141635 000114
00050: 000000 000563 000001 000005 141640 000162 000000 000563
00060: 000001 000005 141643 177777 000000 100001 000162 000563
00070: 000000 000005 000000 141643 000000 000000 000000 000000
00100: SAME: TO 000200-1
```

*T RECORD 1066 (%2052, #42A)
```
00000: 035000 060155 025073 002466 000000 177777 000044 000227
00010: 163734 023000 000000 141600 000003 000000 000000 000000
00020: 000000 000561 000600 000001 000000 000000 000000 000000
00030: 000160 000226 000001 000000 000000 000000 000000 000561
00040: 000600 000001 000000 000000 000000 000000 100000 000044
00050: 000000 000704 000564 000014 000377 000377 000000 051520
00060: 040503 042440 046505 051525 000000 051040 052524 044514
00070: 020040 155401 000000 000000 000000 000000 000000 000000
00100: SAME: TO 000200-1
```

*T RECORD 1067 (%2053, #42B)
```
00000: 002000 120000 120000 000000 000000 000000 000000 000000
00010: SAME: TO 000200-1
```

*T RECORD 1068 (%2054, #42C)
```

```

```
00000: 025000 020000 161322 077123 052104 051440 010410 000000
00010: SAME: TO 000020-1
00020: 000000 020123 052101 052125 051440 042111 051520 040514
00030: 054440 026122 040503 044105 046040 036070 033060 031060
00040: 031056 030465 032460 037040 020040 020040 020040 020040
00050: 020040 020040 000000 000000 000000 000000 000000 000000
00060: SAME: TO 000200-1

*T RECORD 1069 (%2055, #42D)
00000: 003400 040001 062630 077123 052104 051400 000000 000000
00010: SAME: TO 000200-1

*T RECORD 1070 (%2056, #42E)
00000: 036000 060156 035170 000000 000000 010407 034001 022631
00010: 031460 000000 000000 000440 017070 031461 000000 000440
00020: 000000 007170 031461 000000 000440 017340 000000 033760
00030: 000000 000502 017140 033760 000000 000000 000503 017000
00040: 031460 000000 000000 000440 017340 033760 000000 000500
00050: 000000 017140 033760 000000 000501 007000 000000 031460
00060: 000000 000040 017040 033760 000000 000000 000500 017140
00070: 033760 000000 000000 000501 000000 000000 000000 000000
00100: SAME: TO 000200-1

*T RECORD 1071 (%2057, #42F)
00000: 036000 060156 106336 000056 000000 007000 031460 000000
00010: 000440 017340 000000 033760 000000 000500 017140 033760
00020: 000000 000000 000501 017140 120523 034001 000000 022647
00030: 033760 000000 000502 017140 000000 033760 000000 000503
00040: 017140 033760 000000 000000 000504 017140 033760 000000
00050: 000000 000505 017140 033760 000000 000506 000000 017140
00060: 033760 000000 000507 017140 000000 031760 141732 000440
00070: 017360 031760 000000 141661 000000 000000 000000 000000
00100: SAME: TO 000200-1

*T RECORD 1072 (%2060, #430)
00000: 036000 060156 072256 000134 000000 000440 017300 031460
00010: 000000 000440 000000 017070 031461 000000 000440 017170
00020: 000000 031462 000000 000440 017170 031463 000000 000000
00030: 000440 017170 031760 040000 000000 000440 017170 031760
00040: 000002 000440 000000 017170 112165 034001 022665 031760
00050: 000000 040000 000440 017170 031760 000002 000000 000440
00060: 017170 041260 000002 000640 000000 017170 031466 000000
00070: 000440 017170 000000 031467 000000 000000 000000 000000
00100: SAME: TO 000200-1

*T RECORD 1073 (%2061, #431)
00000: 036000 060156 043740 000212 000000 000000 000440 017170
00010: 031464 000000 000000 000440 017170 031465 000000 000440
00020: 000000 017170 031464 000000 000440 017170 000000 031465
00030: 000000 000440 017170 041260 000000 000000 000640 017170
00040: 031760 040000 000000 000440 017170 031760 000002 000440
00050: 000000 017170 033760 000003 000440 017000 000000 001560
00060: 144250 000440 017340 166545 000000 034001 022703 101760
00070: 000000 000500 000000 017300 000000 000000 000000 000000
00100: SAME: TO 000200-1

*T RECORD 1074 (%2062, #432)
00000: 036000 060156 060021 000270 000000 031460 000000 000040
```

```
00010: 017100 041260 000000 000000 000440 017170 023760 000000
00020: 000000 000521 017000 001560 144254 000440 000000 017340
00030: 011461 000000 000440 017360 000000 013460 000000 000440
00040: 017000 031460 000000 022702 114040 005000 033760 002000
00050: 000000 000440 037150 031760 001001 000440 000000 017340
00060: 031560 000000 000500 017070 000000 033760 000700 000440
00070: 017000 031760 000000 001002 000000 000000 000000 000000
00100: SAME: TO 000200-1

*T RECORD 1075 (%2063, #433)
00000: 036000 060156 137610 000346 000000 000440 017340 031560
00010: 000000 000500 000000 017070 035606 034001 022721 031460
00020: 000000 000000 000040 027170 031460 000000 000000 000440
00030: 017340 033760 000000 000501 000000 017140 033760 000000
00040: 000502 017140 000000 033760 000000 000503 017140 033760
00050: 000000 000000 000504 017140 033760 000000 000000 000505
00060: 017140 033760 000000 000506 000000 017140 033760 000000
00070: 000507 017140 000000 033760 000000 000000 000000 000000
00100: SAME: TO 000200-1

*T RECORD 1076 (%2064, #434)
00000: 036000 060156 111624 000424 000000 000000 000510 017140
00010: 033760 000000 000000 000511 017140 031760 141657 000440
00020: 000000 017360 031471 000000 000440 017270 000000 031470
00030: 000000 000440 017270 126326 000000 034001 022737 031467
00040: 000000 000440 000000 017270 031466 000000 000440 017270
00050: 000000 031465 000000 000440 017270 031464 000000 000000
00060: 000440 017270 031463 000000 000000 000440 017270 031462
00070: 000000 000440 000000 017270 000000 000000 000000 000000
00100: SAME: TO 000200-1

*T RECORD 1077 (%2065, #435)
00000: 036000 060156 171310 000502 000000 031461 000000 000440
00010: 017270 001560 000000 000014 000440 017340 031760 141660
00020: 000000 000440 017360 001560 000017 000440 000000 017340
00030: 033760 000000 000501 017140 000000 033760 000000 000502
00040: 017140 033760 000000 000000 000503 017140 101760 141743
00050: 000000 000440 017360 034167 034001 022755 000000 031463
00060: 000000 000440 017270 031462 000000 000000 000440 017270
00070: 031461 000000 000000 000440 000000 000000 000000 000000
00100: SAME: TO 000200-1

*T RECORD 1078 (%2066, #436)
00000: 036000 060156 042551 000560 000000 017270 031760 145703
00010: 000440 017340 000000 033760 001000 000441 017000 033760
00020: 000000 003000 000442 017000 121561 000000 000000 000500
00030: 017000 121562 023053 020500 000000 005000 031460 023053
00040: 020040 005000 000000 001560 000033 000440 017340 033760
00050: 000000 000000 000505 017140 033760 000000 000000 000506
00060: 017140 033760 000000 000507 000000 017140 031760 141670
00070: 000440 017360 000000 070757 000000 000000 000000 000000
00100: SAME: TO 000200-1

*T RECORD 1079 (%2067, #437)
00000: 036000 060156 172123 000636 000000 034001 022773 031467
00010: 000000 000440 000000 017270 031466 000000 000440 017270
00020: 000000 031465 000000 000440 017270 001560 000000 000023
00030: 000440 017340 033760 000000 000000 000501 017140 033760
```

```
00040: 000000 000502 000000 017140 033760 000000 000503 017140
00050: 000000 031760 141712 000440 017360 031463 000000 000000
00060: 000440 017270 031462 000000 000000 000440 017270 031461
00070: 000000 000440 000000 017270 000000 000000 000000 000000
00100: SAME: TO 000200-1

*T RECORD 1080 (%2070, #438)
00000: 036000 060156 156466 000714 000000 001560 000122 000440
00010: 017340 033760 000000 000000 000501 017140 033760 000000
00020: 000000 000502 017140 026453 034001 023011 000000 033760
00030: 000000 000503 017140 031760 000000 141716 000440 017360
00040: 031463 000000 000000 000440 017270 031462 000000 000440
00050: 000000 017270 031461 000000 000440 017270 000000 001560
00060: 000060 000440 017340 033760 000000 000000 000501 017140
00070: 033760 000000 000000 000502 000000 000000 000000 000000
00100: SAME: TO 000200-1

*T RECORD 1081 (%2071, #439)
00000: 036000 060156 073127 000772 000000 017140 033760 000000
00010: 000503 017140 000000 031760 141674 000440 017360 031463
00020: 000000 000000 000440 017270 031462 000000 000000 000440
00030: 017270 031461 000000 000440 000000 017270 001560 000066
00040: 000440 017340 000000 166536 034001 023027 033760 000000
00050: 000000 000501 017140 031760 141676 000440 000000 017360
00060: 031461 000000 000440 017270 000000 001560 000116 000440
00070: 017340 033760 000000 000000 000000 000000 000000 000000
00100: SAME: TO 000200-1

*T RECORD 1082 (%2072, #43A)
00000: 036000 060156 172622 001050 000000 000501 017140 033760
00010: 000000 000502 000000 017140 033760 000000 000503 017140
00020: 000000 031760 141702 000440 017360 031463 000000 000000
00030: 000440 017270 031462 000000 000000 000440 017270 031461
00040: 000000 000440 000000 017270 001560 000142 000440 017340
00050: 000000 033760 000000 000501 017140 033760 000000 000000
00060: 000502 017140 173270 034001 000000 023045 033760 000000
00070: 000503 017140 000000 031760 000000 000000 000000 000000
00100: SAME: TO 000200-1

*T RECORD 1083 (%2073, #43B)
00000: 036000 060156 140463 001126 000000 141706 000440 017360
00010: 031463 000000 000000 000440 017270 031462 000000 000440
00020: 000000 017270 031461 000000 000440 017270 000000 043260
00030: 023231 000441 006000 031460 000000 024076 000040 006000
00040: 031460 000000 000000 000040 007000 031760 144733 000440
00050: 000000 017340 031760 000000 006500 017000 000000 041260
00060: 023074 020440 005070 031760 000000 141724 000440 017340
00070: 031760 000000 000000 000500 000000 000000 000000 000000
00100: SAME: TO 000200-1

*T RECORD 1084 (%2074, #43C)
00000: 036000 060156 174404 001204 000000 017000 031460 023066
00010: 115040 005000 000000 025635 034001 023063 031760 141731
00020: 000000 000440 017340 031760 000000 000500 000000 017000
00030: 031460 000000 115040 017000 000000 031460 023075 000040
00040: 006000 031460 000000 023145 000040 006000 031460 023332
00050: 000000 000040 006000 031460 023700 000040 000000 006000
00060: 031460 024040 000040 006000 000000 031460 024006 000040
```

```
00070: 006000 031460 000000 000000 000000 000000 000000 000000
00100: SAME: TO 000200-1


*T RECORD 1085 (%2075, #43D)
00000: 036000 060156 044262 001262 000000 000040 007000 031760
00010: 134721 000440 000000 017340 033760 000000 000501 017140
00020: 000000 033760 000000 000500 017140 033760 000000 000000
00030: 000503 017140 034603 034001 000000 023101 033760 026663
00040: 000502 006000 000000 031460 023104 000040 006000 031460
00050: 000000 000000 000040 007000 033760 000003 000000 000442
00060: 017000 031460 000000 000020 000000 015000 031460 003577
00070: 000040 006000 000000 023113 000000 000000 000000 000000
00100: SAME: TO 000200-1


*T RECORD 1086 (%2076, #43E)
00000: 036000 060156 130455 001340 000000 023126 050040 002000
00010: 031760 142440 000000 000440 017070 013462 000000 000442
00020: 000000 017000 023107 023122 014040 001000 000000 031760
00030: 101365 000440 017340 033760 000000 000000 000503 017000
00040: 001562 142330 000000 000440 017340 041563 000000 000500
00050: 000000 017000 175171 034001 023117 023121 000000 023135
00060: 020040 002000 031460 023122 000000 000040 016000 031460
00070: 023126 000040 000000 006000 000000 000000 000000 000000
00100: SAME: TO 000200-1


*T RECORD 1087 (%2077, #43F)
00000: 036000 060156 175714 001416 000000 013462 000000 000442
00010: 017000 031460 000000 023115 114040 005000 031460 000000
00020: 000000 000040 011000 031760 000000 003400 000000 007010
00030: 001562 142334 000440 017340 000000 033760 000000 000504
00040: 017000 001564 000000 142126 000440 017300 041260 000000
00050: 000000 000440 017070 031760 000003 000440 000000 017170
00060: 031760 142445 000440 017170 000000 031460 000000 000040
00070: 007000 064532 000000 034001 000000 000000 000000 000000
00100: SAME: TO 000200-1


*T RECORD 1088 (%2100, #440)
00000: 036000 060156 010462 001474 000000 023135 001562 142340
00010: 000440 017340 000000 033760 000000 000504 017000 001562
00020: 000000 142334 000440 017340 033760 000000 000000 000505
00030: 017000 001565 142126 000440 000000 017300 101760 000000
00040: 000440 017070 000000 031760 030003 000440 017170 031464
00050: 000000 000000 000440 007170 033760 134204 000000 000440
00060: 017000 031760 141722 000440 000000 017340 033760 000000
00070: 000502 017140 000000 033760 000000 000000 000000 000000
00100: SAME: TO 000200-1


*T RECORD 1089 (%2101, #441)
00000: 036000 060156 077104 001552 000000 023215 000505 006000
00010: 031760 142267 000000 000440 017300 031460 022631 000040
00020: 000000 006000 057312 034001 023153 031460 000000 023176
00030: 150040 005000 033760 134251 000000 000440 017000 031760
00040: 141720 000440 000000 017340 033760 000000 000502 017140
00050: 000000 033760 023215 000505 006000 031760 000000 142271
00060: 000440 017300 031460 022631 000000 000040 006000 033760
00070: 134327 000440 000000 017000 000000 000000 000000 000000
00100: SAME: TO 000200-1
```

```
*T RECORD 1090 (%2102, #442)
00000: 036000 060156 131244 001630 000000 031760 141727 000440
00010: 017340 033760 000000 000000 000502 017140 033760 023215
00020: 000000 000505 006000 031760 142273 000440 000000 017300
00030: 031460 022631 000040 006000 000000 033760 134374 000440
00040: 017000 035372 000000 034001 023171 031760 141725 000440
00050: 000000 017340 033760 000000 000502 017140 000000 033760
00060: 023215 000505 006000 031760 000000 142275 000440 017300
00070: 031460 022631 000000 000040 000000 000000 000000 000000
00100: SAME: TO 000200-1

*T RECORD 1091 (%2103, #443)
00000: 036000 060156 031623 001706 000000 006000 003700 000000
00010: 000441 017000 000000 031760 142300 000440 017340 063561
00020: 000000 000000 000501 017000 001700 000000 000000 122440
00030: 017070 033760 003000 000441 000000 017000 033760 001000
00040: 000442 017000 000000 033760 142267 000443 017000 031760
00050: 000000 145703 000440 017340 121561 000000 000000 000500
00060: 017000 140264 034001 023207 000000 121562 023212 020500
00070: 005000 043260 000000 023213 000000 000000 000000 000000
00100: SAME: TO 000200-1

*T RECORD 1092 (%2104, #444)
00000: 036000 060156 163737 001764 000000 120441 005000 033760
00010: 142323 000443 000000 017000 103760 000000 000441 017000
00020: 000000 031460 023231 150040 006000 031460 000000 000000
00030: 000040 007000 001560 000030 000000 000440 017340 033760
00040: 000000 000500 000000 017140 031460 000000 000020 015000
00050: 000000 003700 000000 000452 017000 033760 000000 014275
00060: 000501 006000 031472 000000 000000 000440 017000 033465
00070: 015112 120443 000000 006000 000000 000000 000000 000000
00100: SAME: TO 000200-1

*T RECORD 1093 (%2105, #445)
00000: 036000 060156 153403 002042 000000 033760 062000 000442
00010: 017000 143615 000000 034001 023225 033760 000016 000443
00020: 000000 017000 031460 015112 000040 006000 000000 031460
00030: 000000 000040 011000 031760 000000 000000 003400 007010
00040: 031461 000000 000000 000420 015000 031460 023250 120040
00050: 000000 005000 031760 141677 000440 017340 000000 033760
00060: 000000 000500 017140 033760 000000 000000 000501 017140
00070: 033760 000000 000000 000502 000000 000000 000000 000000
00100: SAME: TO 000200-1

*T RECORD 1094 (%2106, #446)
00000: 036000 060156 007017 002120 000000 017140 033760 015112
00010: 000503 006000 000000 031460 015263 000040 006000 043561
00020: 000000 000377 000441 017000 031460 023270 000000 000040
00030: 006000 056514 034001 023243 000000 033760 177777 000442
00040: 017000 033760 000000 142267 000443 017000 033760 060206
00050: 000000 000444 017000 033760 000247 000445 000000 017000
00060: 031460 023255 000040 016000 000000 031760 141732 000440
00070: 017340 033760 000000 000000 000000 000000 000000 000000
00100: SAME: TO 000200-1

*T RECORD 1095 (%2107, #447)
00000: 036000 060156 120015 002176 000000 000500 017000 033760
00010: 000247 000442 000000 017000 033760 030007 000444 017000
```

259

```
00020: 000000 033760 000256 000445 017000 031760 000000 142301
00030: 000440 017300 031460 022631 000000 000040 006000 031462
00040: 000000 000440 000000 017030 031760 142217 000440 017360
00050: 000000 126325 034001 023261 031463 000000 000000 000440
00060: 017030 031760 142211 000440 000000 017360 031464 000000
00070: 000440 017030 000000 031760 000000 000000 000000 000000
00100: SAME: TO 000200-1
```

```
*T RECORD 1096 (%2110, #448)
00000: 036000 060156 073057 002254 000000 142203 000440 017360
00010: 031465 000000 000000 000440 011030 031760 142200 000440
00020: 000000 017360 031760 000000 003400 007010 000000 031760
00030: 142307 000440 017300 031460 000000 022631 000040 006000
00040: 031760 142307 000000 000440 017030 033760 000000 000500
00050: 000000 017000 031760 142317 000440 017030 000000 033760
00060: 000000 000501 017000 031460 000000 022633 000040 006000
00070: 062453 034001 000000 023277 000000 000000 000000 000000
00100: SAME: TO 000200-1
```

```
*T RECORD 1097 (%2111, #449)
00000: 036000 060156 157564 002332 000000 031460 015027 000040
00010: 006000 031760 000000 142311 000440 017300 031460 022631
00020: 000000 000040 006000 031760 142311 000440 000000 017340
00030: 031760 000000 000500 017000 000000 031460 023327 020040
00040: 005000 031460 000000 023317 014040 005000 031760 142321
00050: 000000 000440 017030 033760 000000 000500 000000 017000
00060: 031760 142307 000440 017030 000000 033760 000000 000501
00070: 017000 031460 000000 022633 000000 000000 000000 000000
00100: SAME: TO 000200-1
```

```
*T RECORD 1098 (%2112, #44A)
00000: 036000 060156 006515 002410 000000 000040 006000 031460
00010: 015027 000040 000000 006000 031760 142307 000440 017300
00020: 000000 017411 034001 023315 031460 022631 000000 000040
00030: 006000 031460 023327 000040 000000 016000 031760 142317
00040: 000440 017030 000000 033760 000000 000500 017000 031760
00050: 000000 142307 000440 017030 033760 000000 000000 000501
00060: 017000 031460 022633 000040 000000 006000 031460 015140
00070: 000040 006000 000000 031760 000000 000000 000000 000000
00100: SAME: TO 000200-1
```

```
*T RECORD 1099 (%2113, #44B)
00000: 036000 060156 151002 002466 000000 142307 000440 017300
00010: 031460 022631 000000 000040 006000 031760 142307 000440
00020: 000000 017300 031460 022641 000040 006000 000000 031460
00030: 000000 000040 007000 043260 000000 000000 000440 017000
00040: 040347 034001 000000 023333 031760 000101 000440 017340
00050: 000000 031760 000000 000500 017000 041260 000000 023340
00060: 044440 005030 033760 000002 000000 000440 017000 101760
00070: 000000 000440 000000 017030 000000 000000 000000 000000
00100: SAME: TO 000200-1
```

```
*T RECORD 1100 (%2114, #44C)
00000: 036000 060156 032120 002544 000000 031760 142277 000440
00010: 017360 031760 000000 142016 000440 017300 031760 142374
00020: 000000 000440 017070 031760 142011 000440 000000 017300
00030: 031760 142360 000440 017070 000000 031760 142125 000440
00040: 017300 001560 000000 134722 000440 017070 031760 030003
```

```
00050: 000000 000440 017270 031760 142117 000440 000000 017360
00060: 107411 034001 023351 001560 000000 134721 000440 017170
00070: 031760 142327 000000 000440 000000 000000 000000 000000
00100: SAME: TO 000200-1


*T RECORD 1101 (%2115, #44D)
00000: 036000 060156 102472 002622 000000 017340 033760 000000
00010: 000500 017000 000000 031760 135336 000440 017340 031760
00020: 000000 142327 000440 017360 123560 000000 000000 000502
00030: 017000 003720 000000 000440 000000 017000 033162 000000
00040: 000440 017000 000000 031460 000000 122040 017000 031760
00050: 000000 142326 000440 017340 033760 000000 000000 000500
00060: 017000 031760 142325 000440 000000 017340 031760 142326
00070: 000440 017360 000000 123560 000000 000000 000000 000000
00100: SAME: TO 000200-1


*T RECORD 1102 (%2116, #44E)
00000: 036000 060156 104406 002700 000000 000000 000502 017000
00010: 036045 034001 000000 023367 003720 000000 000441 017000
00020: 000000 033162 000000 000441 017000 031460 000000 000000
00030: 122040 017000 031460 000000 000000 000020 015000 031760
00040: 000000 000500 000000 015000 031460 023403 120040 006000
00050: 000000 031460 000000 000040 011000 021760 000000 000000
00060: 000400 017000 031460 023402 000000 020040 006000 031460
00070: 000000 000040 000000 011000 000000 000000 000000 000000
00100: SAME: TO 000200-1


*T RECORD 1103 (%2117, #44F)
00000: 036000 060156 166704 002756 000000 031760 000000 003400
00010: 007010 031460 000000 000000 000040 007000 033760 001000
00020: 000000 000450 017000 043260 000000 000447 000000 017000
00030: 154247 034001 023405 031760 000000 145703 000440 017340
00040: 121570 000000 000000 000500 017000 033760 003000 000050
00050: 000000 017000 121570 023415 020500 005000 000000 031460
00060: 023415 020040 005000 031760 000000 142277 000440 017340
00070: 031760 000000 000000 000500 000000 000000 000000 000000
00100: SAME: TO 000200-1


*T RECORD 1104 (%2120, #450)
00000: 036000 060156 160331 003034 000000 017000 031460 023416
00010: 020040 005000 000000 033760 000002 000447 017000 001567
00020: 000000 134721 000440 017340 033760 000000 000000 000510
00030: 017140 031760 142307 000440 000000 017360 031760 144742
00040: 000440 017340 000000 033760 000002 000447 017000 164622
00050: 000000 034001 023423 121567 000000 000500 000000 017000
00060: 031470 023426 120440 005030 000000 111570 001000 000440
00070: 017030 031760 000000 142303 000000 000000 000000 000000
00100: SAME: TO 000200-1


*T RECORD 1105 (%2121, #451)
00000: 036000 060156 106545 003112 000000 000440 017360 031460
00010: 023442 000040 000000 006000 031760 142016 000440 017300
00020: 000000 031760 142410 000440 017070 031760 000000 142011
00030: 000440 017300 031760 142344 000000 000440 017070 031760
00040: 142125 000440 000000 017300 031760 142307 000440 017070
00050: 000000 031760 060207 000440 017270 031760 000000 142117
00060: 000440 017360 031760 142305 000000 000440 017170 114207
00070: 034001 023441 000000 031460 000000 000000 000000 000000
```

261

00100: SAME: TO 000200-1

*T RECORD 1106 (%2122, #452)
00000: 036000 060156 146257 003170 000000 000000 000040 007000
00010: 031760 141675 000000 000440 017340 033760 000000 000500
00020: 000000 017140 033760 000000 000504 017000 000000 031760
00030: 142303 000440 017340 033760 000000 000600 000445 017000
00040: 121565 000000 000000 000500 017000 031460 023455 041040
00050: 000000 005000 031760 141703 000440 017340 000000 033760
00060: 000000 006506 017000 031460 000000 023465 120040 005000
00070: 031460 000000 000000 002040 000000 000000 000000 000000
00100: SAME: TO 000200-1

*T RECORD 1107 (%2123, #453)
00000: 036000 060156 007030 003246 000000 017000 121560 000000
00010: 000500 017030 000000 031760 142303 000440 017360 134645
00020: 000000 034001 023457 031760 142307 000440 000000 017340
00030: 033760 001000 000445 017000 000000 121565 000000 000500
00040: 017000 031460 000000 023465 042040 005000 031466 023465
00050: 000000 150440 005000 031460 000000 021040 000000 017000
00060: 121564 000000 000500 017030 000000 031760 142307 000440
00070: 017360 031460 000000 000000 000000 000000 000000 000000
00100: SAME: TO 000200-1

*T RECORD 1108 (%2124, #454)
00000: 036000 060156 100163 003324 000000 000020 015000 031760
00010: 142303 000440 000000 017340 033760 014744 000500 006000
00020: 000000 031760 142303 000440 017300 031460 000000 022631
00030: 000040 006000 031760 142307 000000 000440 017340 161735
00040: 034001 023475 000000 033760 014744 000500 006000 031760
00050: 000000 142307 000440 017300 031460 022631 000000 000040
00060: 006000 031460 000000 000040 000000 011000 031760 000000
00070: 003400 017010 000000 031460 000000 000000 000000 000000
00100: SAME: TO 000200-1

*T RECORD 1109 (%2125, #455)
00000: 036000 060156 017501 003402 000000 023577 150040 005000
00010: 031460 000000 000000 000020 015000 031760 142303 000440
00020: 000000 017030 033760 000000 000500 017000 000000 031760
00030: 141705 000440 017030 033760 000000 000000 000501 017000
00040: 031460 022633 000000 000040 006000 031460 015112 000040
00050: 000000 006000 031760 142305 000440 017300 000000 154173
00060: 034001 023513 031460 022631 000000 000040 006000 031760
00070: 142307 000440 000000 017030 000000 000000 000000 000000
00100: SAME: TO 000200-1

*T RECORD 1110 (%2126, #456)
00000: 036000 060156 117773 003460 000000 033760 000000 000500
00010: 017000 031760 000000 141703 000440 017030 033760 000000
00020: 000000 000501 017000 031460 022633 000040 000000 006000
00030: 031460 015112 000040 006000 000000 031760 142311 000440
00040: 017300 031460 000000 022631 000040 006000 031760 142305
00050: 000000 000440 017030 033760 000000 000500 000000 017000
00060: 031760 142311 000440 017030 000000 033760 000000 000501
00070: 017000 031460 000000 022633 000000 000000 000000 000000
00100: SAME: TO 000200-1

*T RECORD 1111 (%2127, #457)

```
00000: 036000 060156 075107 003536 000000 000040 006000 164240
00010: 034001 023531 000000 031460 015024 000040 006000 031760
00020: 000000 142305 000440 017300 031460 022631 000000 000040
00030: 006000 031760 142305 000440 000000 017030 033760 000000
00040: 000500 017000 000000 031760 141677 000440 017030 033760
00050: 000000 000000 000501 017000 031460 022633 000000 000040
00060: 006000 031460 015112 000040 000000 006000 031760 142305
00070: 000440 017300 000000 031460 000000 000000 000000 000000
00100: SAME: TO 000200-1
```

*T RECORD 1112 (%2130, #458)
```
00000: 036000 060156 017225 003614 000000 022631 000040 006000
00010: 031760 142305 000000 000440 017030 033760 000000 000500
00020: 000000 017000 031760 141661 000440 017030 000000 116551
00030: 034001 023547 033760 000000 000000 000501 017000 031460
00040: 022633 000040 000000 006000 031460 015024 000040 006000
00050: 000000 031760 142305 000440 017300 031460 000000 022631
00060: 000040 006000 031760 142305 000000 000440 017030 033760
00070: 000000 000500 000000 017000 000000 000000 000000 000000
00100: SAME: TO 000200-1
```

*T RECORD 1113 (%2131, #459)
```
00000: 036000 060156 111347 003672 000000 031760 141671 000440
00010: 017030 033760 000000 000000 000501 017000 031460 022633
00020: 000000 000040 006000 031460 015027 000040 000000 006000
00030: 031760 142305 000440 017300 000000 031460 022631 000040
00040: 006000 031760 000000 142305 000440 017030 165521 034001
00050: 000000 023565 033760 000000 000500 017000 000000 031760
00060: 141665 000440 017030 033760 000000 000000 000501 017000
00070: 031460 022633 000000 000040 000000 000000 000000 000000
00100: SAME: TO 000200-1
```

*T RECORD 1114 (%2132, #45A)
```
00000: 036000 060156 106065 003750 000000 006000 031460 015140
00010: 000040 006000 000000 031760 142305 000440 017300 031460
00020: 000000 022631 000040 006000 031460 000000 000000 000040
00030: 011000 031760 000000 003400 000000 017010 031460 023602
00040: 000040 016000 000000 031760 047040 000440 017030 031760
00050: 000000 142305 000440 017360 031760 000034 000000 000440
00060: 017170 031460 023674 154040 000000 005000 104243 034001
00070: 023603 031760 000000 142303 000000 000000 000000 000000
00100: SAME: TO 000200-1
```

*T RECORD 1115 (%2133, #45B)
```
00000: 036000 060156 063106 004026 000000 000440 017030 033760
00010: 000000 000500 000000 017000 031760 141703 000440 017030
00020: 000000 033760 000000 000501 017000 031460 000000 022633
00030: 000040 006000 031460 015112 000000 000040 006000 031760
00040: 142303 000440 000000 017300 031460 022631 000040 006000
00050: 000000 031760 142307 000440 017030 033760 000000 000000
00060: 000500 017000 031760 141705 000000 000440 017030 033760
00070: 000000 000501 000000 017000 000000 000000 000000 000000
00100: SAME: TO 000200-1
```

*T RECORD 1116 (%2134, #45C)
```
00000: 036000 060156 073452 004104 000000 031460 022633 000040
00010: 006000 031460 000000 015112 000040 006000 156175 034001
00020: 000000 023621 031760 142307 000440 017300 000000 031460
```

263

```
00030: 022631 000040 006000 031760 000000 142307 000440 017030
00040: 033760 000000 000000 000500 017000 031760 142303 000440
00050: 000000 017030 033760 000000 000501 017000 000000 031460
00060: 022633 000040 006000 031460 000000 015027 000040 006000
00070: 031760 142307 000000 000440 000000 000000 000000 000000
00100: SAME: TO 000200-1

*T RECORD 1117 (%2135, #45D)
00000: 036000 060156 050635 004162 000000 017300 031460 022631
00010: 000040 006000 000000 031760 142307 000440 017030 033760
00020: 000000 000000 000500 017000 031760 141701 000000 000440
00030: 017030 033760 000000 000501 000000 017000 116127 034001
00040: 023637 031460 000000 022633 000040 006000 031460 015112
00050: 000000 000040 006000 031760 142307 000440 000000 017300
00060: 031460 022631 000040 006000 000000 031760 142307 000440
00070: 017030 033760 000000 000000 000000 000000 000000 000000
00100: SAME: TO 000200-1

*T RECORD 1118 (%2136, #45E)
00000: 036000 060156 106767 004240 000000 000500 017000 031760
00010: 141663 000440 000000 017030 033760 000000 000501 017000
00020: 000000 031460 022633 000040 006000 031460 000000 015024
00030: 000040 006000 031760 142307 000000 000440 017300 031460
00040: 022631 000040 000000 006000 031760 142307 000440 017030
00050: 000000 033760 000000 000500 017000 165675 000000 034001
00060: 023655 031760 141673 000440 000000 017030 033760 000000
00070: 000501 017000 000000 031460 000000 000000 000000 000000
00100: SAME: TO 000200-1

*T RECORD 1119 (%2137, #45F)
00000: 036000 060156 077450 004316 000000 022633 000040 006000
00010: 031460 015027 000000 000040 006000 031760 142307 000440
00020: 000000 017300 031460 022631 000040 006000 000000 031760
00030: 142307 000440 017030 033760 000000 000000 000500 017000
00040: 031760 141667 000000 000440 017030 033760 000000 000501
00050: 000000 017000 031460 022633 000040 006000 000000 031460
00060: 015140 000040 006000 031760 000000 142307 000440 017300
00070: 031460 022631 000000 000040 000000 000000 000000 000000
00100: SAME: TO 000200-1

*T RECORD 1120 (%2140, #460)
00000: 036000 060156 037755 004374 000000 006000 165335 034001
00010: 023673 031460 000000 023677 000040 016000 031760 047040
00020: 000000 000440 017030 031760 142307 000440 000000 017360
00030: 031760 000034 000440 017170 000000 031460 000000 000040
00040: 007000 031760 000000 141766 000440 017300 031760 000002
00050: 000000 000440 017070 031460 023705 050040 000000 005000
00060: 031760 000001 000440 017070 000000 043260 000000 000441
00070: 007000 033760 000000 134251 000000 000000 000000 000000
00100: SAME: TO 000200-1

*T RECORD 1121 (%2141, #461)
00000: 036000 060156 160620 004452 000000 000440 017000 001560
00010: 000045 000440 000000 017340 033760 000000 000500 017000
00020: 000000 031760 141724 000440 017340 054516 000000 034001
00030: 023711 043260 000000 000442 000000 017000 031760 000000
00040: 000500 017000 000000 023715 023771 014040 002000 031460
00050: 000000 023737 000040 016000 001560 000000 000000 000500
```

```
00060: 017030 033760 000550 000440 000000 017000 121560 000000
00070: 000500 017000 000000 031460 000000 000000 000000 000000
00100: SAME: TO 000200-1


*T RECORD 1122 (%2142, #462)
00000: 036000 060156 010135 004530 000000 023722 014040 005000
00010: 121560 000000 000000 000500 017030 031760 142265 000440
00020: 000000 017360 031760 142267 000440 017030 000000 031760
00030: 142232 000440 017360 031760 000000 060106 000440 017270
00040: 031760 142236 000000 000440 017360 053624 034001 023727
00050: 000000 031760 142271 000440 017170 031760 000000 142265
00060: 000440 017030 031760 142256 000000 000440 017360 031760
00070: 030003 000440 000000 017270 000000 000000 000000 000000
00100: SAME: TO 000200-1


*T RECORD 1123 (%2143, #463)
00000: 036000 060156 067442 004606 000000 101760 000000 000440
00010: 017030 031760 000000 142230 000440 017360 031760 142235
00020: 000000 000440 017360 031760 142254 000440 000000 017360
00030: 033760 134374 000440 017000 000000 001560 000045 000440
00040: 017340 033760 000000 000000 000500 017000 031760 141731
00050: 000000 000440 017340 033760 000005 000442 000000 017000
00060: 033760 000012 000441 017000 000000 031103 034001 023745
00070: 031760 000000 000000 000500 000000 000000 000000 000000
00100: SAME: TO 000200-1


*T RECORD 1124 (%2144, #464)
00000: 036000 060156 112066 004664 000000 017000 001560 023771
00010: 014500 005030 000000 033760 000550 000440 017000 121560
00020: 000000 000000 000500 017000 031460 023753 000000 014040
00030: 005000 121560 000000 000500 000000 017030 031760 142266
00040: 000440 017360 000000 031760 142273 000440 017030 031760
00050: 000000 142244 000440 017360 031760 060106 000000 000440
00060: 017270 031760 142250 000440 000000 017360 031760 142275
00070: 000440 017170 000000 031760 000000 000000 000000 000000
00100: SAME: TO 000200-1


*T RECORD 1125 (%2145, #465)
00000: 036000 060156 162561 004742 000000 142266 000440 017030
00010: 031760 142263 000000 000440 017360 101712 034001 023763
00020: 000000 031760 030003 000440 017270 101760 000000 000000
00030: 000440 017030 031760 142242 000000 000440 017360 031760
00040: 142247 000440 000000 017360 031760 142261 000440 017360
00050: 000000 031460 000000 000040 007000 031760 000000 142442
00060: 000440 017030 001561 142232 000000 000440 017360 001561
00070: 142237 000440 000000 017360 000000 000000 000000 000000
00100: SAME: TO 000200-1


*T RECORD 1126 (%2146, #466)
00000: 036000 060156 001007 005020 000000 031760 000006 000440
00010: 017270 001561 000000 142231 000440 017360 031760 142440
00020: 000000 000440 017030 001562 142256 000440 000000 017360
00030: 031760 000003 000440 017270 000000 051340 034001 024001
00040: 041260 000000 000000 000440 017030 001561 142230 000440
00050: 000000 017360 001561 142235 000440 017360 000000 001562
00060: 142254 000440 017360 031460 000000 000000 000040 007000
00070: 031760 141717 000000 000440 000000 000000 000000 000000
00100: SAME: TO 000200-1
```

```
*T RECORD 1127 (%2147, #467)
00000: 036000 060156 002025 005076 000000 017340 021760 024031
00010: 154500 005000 000000 041260 000000 022440 017070 031460
00020: 000000 000000 000020 015000 033760 141745 000000 000440
00030: 017000 031460 002745 000040 000000 006000 031460 000000
00040: 000040 011000 000000 033760 141764 000440 017000 031760
00050: 000000 003362 003400 006010 126126 034001 000000 024017
00060: 033760 141754 000440 017000 000000 031460 003362 000040
00070: 006000 033760 000000 141774 000000 000000 000000 000000
00100: SAME: TO 000200-1

*T RECORD 1128 (%2150, #468)
00000: 036000 060156 075026 005154 000000 000440 017000 031460
00010: 003362 054040 000000 006000 033760 142004 000440 017000
00020: 000000 031460 014073 054040 006000 033760 000000 142037
00030: 000440 017000 031460 024030 000000 150040 005000 033760
00040: 142053 000440 000000 017000 031460 014073 000040 006000
00050: 000000 033760 142113 000440 017000 031460 000000 014073
00060: 000040 006000 033760 142172 000000 000440 017000 031460
00070: 024036 150040 000000 005000 000000 000000 000000 000000
00100: SAME: TO 000200-1

*T RECORD 1129 (%2151, #469)
00000: 036000 060156 023506 005232 000000 112165 034001 024035
00010: 033760 142225 000000 000440 017000 031460 014073 000040
00020: 000000 006000 031460 000000 000040 007000 000000 031760
00030: 000337 000440 017340 031760 000000 000000 000500 017000
00040: 031760 142624 000000 000040 017030 031460 024045 020040
00050: 000000 005000 031760 142625 000440 017030 000000 031760
00060: 142170 000440 017360 031760 000000 141646 000440 017340
00070: 101760 000000 000000 000500 000000 000000 000000 000000
00100: SAME: TO 000200-1

*T RECORD 1130 (%2152, #46A)
00000: 036000 060156 165566 005310 000000 017000 031760 024052
00010: 120520 005030 000000 031760 142635 000440 017030 031760
00020: 000000 142163 000440 017360 043202 034001 000000 024053
00030: 031460 000000 000040 007000 000000 031460 000000 000440
00040: 017340 033760 000000 000000 000500 017140 033760 000000
00050: 000000 000501 017000 031760 141675 000440 000000 017340
00060: 111560 000000 000500 017000 000000 031460 024074 014040
00070: 005000 031760 000000 141676 000000 000000 000000 000000
00100: SAME: TO 000200-1

*T RECORD 1131 (%2153, #46B)
00000: 036000 060156 175450 005366 000000 000440 017340 111561
00010: 000000 000500 000000 017000 031460 024074 014040 005000
00020: 000000 031760 141741 000440 017340 121560 000000 000000
00030: 000500 017000 031460 024074 000000 014040 005000 031760
00040: 141743 000440 000000 017340 065440 034001 024071 121561
00050: 000000 000000 000500 017000 031460 024074 000000 014040
00060: 005000 040260 000000 000440 000000 007000 020760 000000
00070: 000440 017000 000000 031460 000000 000000 000000 000000
00100: SAME: TO 000200-1

*T RECORD 1132 (%2154, #46C)
00000: 036000 060156 144112 005444 000000 000000 000040 007000
```

266

```
00010: 031760 141741 000000 000440 017030 033760 000000 000500
00020: 000000 017000 031760 141671 000440 017030 000000 033760
00030: 000000 000501 017000 031460 000000 022633 000040 006000
00040: 031460 015024 000000 000040 006000 031760 141741 000440
00050: 000000 017300 031460 022631 000040 006000 000000 031760
00060: 141741 000440 017030 064343 000000 034001 024107 033760
00070: 000000 000500 000000 017000 000000 000000 000000 000000
00100: SAME: TO 000200-1


*T RECORD 1133 (%2155, #46D)
00000: 036000 060156 121602 005522 000000 031760 141661 000440
00010: 017030 033760 000000 000000 000501 017000 031460 022633
00020: 000000 000040 006000 031460 015027 000040 000000 006000
00030: 031760 141741 000440 017300 000000 031460 022631 000040
00040: 006000 031760 000000 141741 000440 017030 033760 000000
00050: 000000 000500 017000 031760 141677 000440 000000 017030
00060: 033760 000000 000501 017000 000000 031460 022633 000040
00070: 006000 031460 000000 015140 000000 000000 000000 000000
00100: SAME: TO 000200-1


*T RECORD 1134 (%2156, #46E)
00000: 036000 060156 077054 005600 000000 000040 006000 031760
00010: 142313 000440 000000 017300 155764 034001 024125 031460
00020: 000000 022631 000040 006000 031760 142313 000000 000440
00030: 017030 033760 000000 000500 000000 017000 031760 141705
00040: 000440 017030 000000 033760 000000 000501 017000 031460
00050: 000000 022633 000040 006000 031460 015112 000000 000040
00060: 006000 031760 141741 000440 000000 017300 031460 022631
00070: 000040 006000 000000 031760 000000 000000 000000 000000
00100: SAME: TO 000200-1


*T RECORD 1135 (%2157, #46F)
00000: 036000 060156 017276 005656 000000 142313 000440 017030
00010: 033760 000000 000000 000500 017000 031760 141703 000440
00020: 000000 017030 033760 000000 000501 017000 000000 031460
00030: 022633 000040 006000 163710 000000 034001 024143 031460
00040: 015112 000040 000000 006000 031760 142313 000440 017300
00050: 000000 031460 022631 000040 006000 031760 000000 141743
00060: 000440 017030 033760 000000 000000 000500 017000 031760
00070: 141673 000440 000000 017030 000000 000000 000000 000000
00100: SAME: TO 000200-1


*T RECORD 1136 (%2160, #470)
00000: 036000 060156 104502 005734 000000 033760 000000 000501
00010: 017000 031460 000000 022633 000040 006000 031460 015024
00020: 000000 000040 006000 031760 141743 000440 000000 017300
00030: 031460 022631 000040 006000 000000 031760 141743 000440
00040: 017030 033760 000000 000000 000500 017000 031760 141663
00050: 000000 000440 017030 115721 034001 024161 000000 033760
00060: 000000 000501 017000 031460 000000 022633 000040 006000
00070: 031460 015027 000000 000040 000000 000000 000000 000000
00100: SAME: TO 000200-1


*T RECORD 1137 (%2161, #471)
00000: 036000 060156 010172 006012 000000 006000 031760 141743
00010: 000440 017300 000000 031460 022631 000040 006000 031760
00020: 000000 141743 000440 017030 033760 000000 000000 000500
00030: 017000 031760 141701 000440 000000 017030 033760 000000
```

```
00040: 000501 017000 000000 031460 022633 000040 006000 031460
00050: 000000 015140 000040 006000 031760 142315 000000 000440
00060: 017300 031460 022631 000040 000000 006000 031760 142315
00070: 000440 017030 000000 165373 000000 000000 000000 000000
00100: SAME: TO 000200-1


*T RECORD 1138 (%2162, #472)
00000: 036000 060156 125326 006070 000000 034001 024177 033760
00010: 000000 000500 000000 017000 031760 141703 000440 017030
00020: 000000 033760 000000 000501 017000 031460 000000 022633
00030: 000040 006000 031460 015112 000000 000040 006000 031760
00040: 141743 000440 000000 017300 031460 022631 000040 006000
00050: 000000 031760 142315 000440 017030 033760 000000 000000
00060: 000500 017000 031760 141705 000000 000440 017030 033760
00070: 000000 000501 000000 017000 000000 000000 000000 000000
00100: SAME: TO 000200-1


*T RECORD 1139 (%2163, #473)
00000: 036000 060156 075163 006146 000000 031460 022633 000040
00010: 006000 031460 000000 015112 000040 006000 031760 142315
00020: 000000 000440 017300 156521 034001 024215 000000 031460
00030: 022631 000040 006000 031760 000000 141741 000440 017030
00040: 033760 000000 000000 000500 017000 031760 141743 000440
00050: 000000 017030 033760 000000 000501 017000 000000 031460
00060: 022633 000040 006000 031460 000000 015024 000040 006000
00070: 031760 141741 000000 000440 000000 000000 000000 000000
00100: SAME: TO 000200-1


*T RECORD 1140 (%2164, #474)
00000: 036000 060156 126523 006224 000000 017300 031460 022631
00010: 000040 006000 000000 031760 141741 000440 017300 031460
00020: 000000 022641 000040 006000 031460 014747 000000 000040
00030: 006000 031760 141741 000440 000000 017300 031460 000000
00040: 000440 017070 000000 162346 034001 024233 031760 142313
00050: 000000 000440 017030 033760 000000 000500 000000 017000
00060: 031760 142315 000440 017030 000000 033760 000000 000501
00070: 017000 031460 000000 022633 000000 000000 000000 000000
00100: SAME: TO 000200-1


*T RECORD 1141 (%2165, #475)
00000: 036000 060156 111360 006302 000000 000040 006000 031460
00010: 015024 000040 000000 006000 031760 141743 000440 017300
00020: 000000 031460 022631 000040 006000 031760 000000 141743
00030: 000440 017300 031460 022641 000000 000040 006000 031460
00040: 014747 000040 000000 006000 031760 141743 000440 017300
00050: 000000 031460 000000 000440 017070 031460 000000 000000
00060: 000040 007000 141465 034001 000000 024251 031460 025732
00070: 000040 006000 000000 031461 000000 000000 000000 000000
00100: SAME: TO 000200-1


*T RECORD 1142 (%2166, #476)
00000: 036000 060156 072215 006360 000000 000000 000440 017030
00010: 031460 000000 000000 000500 015300 031460 000000 000120
00020: 000000 015000 031760 141663 000440 017030 000000 033760
00030: 000000 000500 017000 031760 000000 141673 000440 017030
00040: 033760 000000 000000 000501 017000 031460 022633 000040
00050: 000000 006000 031460 015027 000040 006000 000000 031760
00060: 142315 000440 017300 031460 000000 022631 000040 006000
```

```
00070: 031460 000000 000000 000040 000000 000000 000000 000000
00100: SAME: TO 000200-1


*T RECORD 1143 (%2167, #477)
00000: 036000 060156 161312 006436 000000 011000 033760 014744
00010: 000400 006000 000000 037407 034001 024267 031760 141676
00020: 000000 000440 017340 033760 000000 000502 000000 017140
00030: 033760 015027 000503 006000 000000 031760 141701 000440
00040: 017340 033760 000000 000000 000502 017140 033760 015112
00050: 000000 000503 006000 031760 142315 000440 000000 017340
00060: 033760 000000 000502 017140 000000 033760 015024 000503
00070: 006000 031760 000000 141733 000000 000000 000000 000000
00100: SAME: TO 000200-1


*T RECORD 1144 (%2170, #478)
00000: 036000 060156 014744 006514 000000 000440 017300 031460
00010: 000000 000440 000000 017070 031460 024353 014040 005000
00020: 000000 031461 000000 000440 017170 031760 000000 141733
00030: 000440 017030 163721 034001 000000 024305 033760 000000
00040: 000500 017000 000000 031760 141711 000440 017030 033760
00050: 000000 000000 000501 017000 031460 022633 000000 000040
00060: 006000 031460 015027 000040 000000 006000 031460 000000
00070: 000440 017000 000000 031460 000000 000000 000000 000000
00100: SAME: TO 000200-1


*T RECORD 1145 (%2171, #479)
00000: 036000 060156 002730 006572 000000 024353 114040 005000
00010: 031760 141661 000000 000440 017030 033760 000000 000500
00020: 000000 017000 031760 141671 000440 017030 000000 033760
00030: 000000 000501 017000 031460 000000 022633 000040 006000
00040: 031460 015027 000000 000040 006000 031760 142313 000440
00050: 000000 017300 127774 034001 024323 031460 000000 022631
00060: 000040 006000 031460 000000 000000 000040 011000 033760
00070: 014744 000400 000000 006000 000000 000000 000000 000000
00100: SAME: TO 000200-1


*T RECORD 1146 (%2172, #47A)
00000: 036000 060156 103027 006650 000000 031760 141675 000440
00010: 017340 033760 000000 000000 000502 017140 033760 015027
00020: 000000 000503 006000 031760 141677 000440 000000 017340
00030: 033760 000000 000502 017140 000000 033760 015112 000503
00040: 006000 031760 000000 142313 000440 017340 033760 000000
00050: 000000 000502 017140 033760 015024 000503 000000 006000
00060: 031760 141735 000440 017300 000000 031460 000000 000440
00070: 017070 004360 000000 034001 000000 000000 000000 000000
00100: SAME: TO 000200-1


*T RECORD 1147 (%2173, #47B)
00000: 036000 060156 035133 006726 000000 024341 031460 024354
00010: 014040 005000 000000 031461 000000 000440 017170 031760
00020: 000000 141735 000440 017030 033760 000000 000000 000500
00030: 017000 031760 141707 000440 000000 017030 033760 000000
00040: 000501 017000 000000 031460 022633 000040 006000 031460
00050: 000000 015027 000040 006000 031460 000000 000000 000440
00060: 017000 024354 024356 014040 000000 001000 031460 000000
00070: 000040 011000 000000 031760 000000 000000 000000 000000
00100: SAME: TO 000200-1
```

```
*T RECORD 1148 (%2174, #47C)
00000: 036000 060156 012327 007004 000000 141733 000440 017300
00010: 021760 000000 000000 000440 017070 031460 025763 000040
00020: 000000 006000 057135 034001 024357 031460 000000 000000
00030: 000040 007000 031760 141733 000000 000440 017340 033760
00040: 000000 000500 000000 017000 031460 024442 014040 005140
00050: 000000 033760 000000 000501 017000 031760 000000 141673
00060: 000440 017340 033760 000000 000000 000502 017140 033760
00070: 015024 000503 000000 006000 000000 000000 000000 000000
00100: SAME: TO 000200-1

*T RECORD 1149 (%2175, #47D)
00000: 036000 060156 124243 007062 000000 031760 141663 000440
00010: 017340 033760 000000 000000 000502 017140 033760 015027
00020: 000000 000503 006000 031760 141701 000440 000000 017340
00030: 033760 000000 000502 017140 000000 033760 015140 000503
00040: 006000 015426 000000 034001 024375 031760 141676 000440
00050: 000000 017340 033760 000000 000502 017140 000000 033760
00060: 015024 000503 006000 031460 000000 014747 000040 006000
00070: 031760 141714 000000 000440 000000 000000 000000 000000
00100: SAME: TO 000200-1

*T RECORD 1150 (%2176, #47E)
00000: 036000 060156 176353 007140 000000 017340 111560 000000
00010: 000500 017000 000000 033760 024442 014501 005000 031760
00020: 000000 141716 000440 017340 001561 000000 000000 000500
00030: 017030 111560 000000 000500 000000 017000 031460 024442
00040: 114040 005000 000000 031760 141737 000440 017300 031460
00050: 000000 000000 000440 017070 031760 141735 000000 000440
00060: 017300 006407 034001 024413 000000 031460 022641 000040
00070: 006000 031760 000000 141671 000000 000000 000000 000000
00100: SAME: TO 000200-1

*T RECORD 1151 (%2177, #47F)
00000: 036000 060156 130654 007216 000000 000440 017340 033760
00010: 000000 000502 000000 017140 033760 015024 000503 006000
00020: 000000 031760 141661 000440 017340 033760 000000 000000
00030: 000502 017140 033760 015027 000000 000503 006000 031760
00040: 141677 000440 000000 017340 033760 000000 000502 017140
00050: 000000 033760 015140 000503 006000 031760 000000 141675
00060: 000440 017340 033760 000000 000000 000502 017140 033760
00070: 015024 000503 000000 006000 000000 000000 000000 000000
00100: SAME: TO 000200-1

*T RECORD 1152 (%2200, #480)
00000: 036000 060156 007365 007274 000000 031460 014747 000040
00010: 006000 020614 000000 024001 024431 031760 141713 000440
00020: 000000 017340 111560 000000 000500 017000 000000 033760
00030: 024442 014501 005000 031760 000000 141715 000440 017340
00040: 001561 000000 000000 000500 017030 111560 000000 000500
00050: 000000 017000 031460 024442 114040 005000 000000 031760
00060: 141740 005440 017300 031460 000000 000000 000440 007070
00070: 031460 000000 000000 001040 000000 000000 000000 000000
00100: SAME: TO 000200-1

*T RECORD 1153 (%2201, #481)
00000: 036000 060156 176151 007352 000000 007000 005407 020400
00010: 141646 177777 000000 177777 177777 177777 177777 177777
```

270

```
00020: 000000 177777 177777 177777 177777 177777 000000 000000
00030: 000000 000000 000000 040000 000000 000002 040000 000002
00040: 000000 000000 000000 000000 000000 000000 000000 076400
00050: 000000 000026 076400 000026 000000 000000 000000 040000
00060: 000002 076715 000400 141717 000000 000001 141720 005400
00070: 141720 000000 000000 000000 000000 000000 000000 000000
00100: SAME: TO 000200-1


*T RECORD 1154 (%2202, #482)
00000: 036000 060156 140160 007430 000000 000000 000000 177777
00010: 000000 000000 000000 000000 000000 177777 000000 141716
00020: 000000 034000 141741 000000 000000 000000 000000 000000
00030: 100004 000245 000246 000377 000000 000133 000000 000000
00040: 000245 000511 000000 000002 000257 000427 000445 000001
00050: 000000 000000 000524 000770 000002 177521 000000 000476
00060: 000514 000001 000000 000245 000000 000511 000002 000257
00070: 000360 000376 000000 000001 000000 000000 000000 000000
00100: SAME: TO 000200-1


*T RECORD 1155 (%2203, #483)
00000: 036000 060156 053315 007506 000000 000000 100004 000526
00010: 000500 000001 000000 000027 142360 000526 000515 000001
00020: 000000 000006 142374 000526 000431 000001 000000 000027
00030: 142557 000526 000362 000001 000000 000027 142513 172007
00040: 034000 142031 000000 000524 000545 000001 000016 142626
00050: 000000 177777 100004 000247 000431 000001 000000 000027
00060: 142447 000247 000362 000001 000000 000027 142543 177777
00070: 100004 000247 000000 000362 000000 000000 000000 000000
00100: SAME: TO 000200-1


*T RECORD 1156 (%2204, #484)
00000: 036000 060156 122452 007564 000000 000001 000027 142463
00010: 000247 000377 000000 000001 000001 142613 000247 000431
00020: 000000 000001 000027 142477 000247 000446 000000 000001
00030: 000001 142613 000247 000500 000000 000001 000027 142573
00040: 000247 000515 000000 000001 000007 142607 177777 100004
00050: 000000 000607 000515 000001 030003 134721 000000 031301
00060: 034000 142121 000706 000515 000000 000001 030003 134722
00070: 000616 000446 000000 000001 000000 000000 000000 000000
00100: SAME: TO 000200-1


*T RECORD 1157 (%2205, #485)
00000: 036000 060156 110251 007642 000000 030003 144377 000652
00010: 000446 000001 000000 030003 144400 000706 000446 000001
00020: 000000 030003 144401 000742 000446 000001 000000 030003
00030: 144402 000526 000446 000001 000000 000001 135336 000526
00040: 000377 000001 000000 000024 000000 000657 000545 000001
00050: 000000 000001 000000 177777 100004 000321 000000 000446
00060: 000001 000015 142614 000265 000000 000446 000001 060210
00070: 142301 000411 000000 000446 000000 000000 000000 000000
00100: SAME: TO 000200-1


*T RECORD 1158 (%2206, #486)
00000: 036000 060156 065110 007720 000000 000001 060106 032317
00010: 034000 142211 000000 142267 000247 000377 000001 000012
00020: 000000 142647 177777 000446 000001 000001 000000 142613
00030: 177777 100004 000337 000377 000000 000001 060106 142267
00040: 000427 000377 000000 000001 060106 142271 000337 000446
```

271

```
00050: 000000 000001 060106 142273 000427 000446 000000 000001
00060: 060106 142275 000355 000515 000000 000001 030003 142265
00070: 000454 000515 000000 000001 000000 000000 000000 000000
00100: SAME: TO 000200-1


*T RECORD 1159 (%2207, #487)
00000: 036000 060156 035513 007776 000000 030003 142266 177777
00010: 000000 000000 000000 062000 000016 062000 000016 062000
00020: 000000 000016 062000 000016 000000 000001 000000 130745
00030: 034000 142301 076400 000026 000000 000000 000000 000000
00040: SAME: TO 000050-1
00050: 000000 000000 000000 040000 000002 000000 000000 000000
00060: 062000 000016 000002 000000 000000 073000 000010 000004
00070: 000002 000001 000000 000021 000000 000000 000000 000000
00100: SAME: TO 000200-1


*T RECORD 1160 (%2210, #488)
00000: 036000 060156 044063 010054 000000 000014 000007 000002
00010: 144402 144401 000000 144400 144377 041517 047522 042072
00020: 000000 020040 020040 044040 020040 020040 000000 020040
00030: 020127 020040 020040 041517 000000 047522 042072 020040
00040: 044040 020040 000000 020040 020040 020127 060044 034000
00050: 000000 142371 020040 020040 020040 050111 000000 054105
00060: 046123 020040 020040 020040 000000 020040 020040 020040
00070: 020040 020040 000000 020040 000000 000000 000000 000000
00100: SAME: TO 000200-1


*T RECORD 1161 (%2211, #489)
00000: 036000 060156 053562 010132 000000 046515 020040 020040
00010: 020040 020040 000000 020040 020040 020040 020040 020040
00020: 000000 020040 020040 044516 041510 042523 000000 020040
00030: 020040 020040 020040 020040 000000 020040 020040 020040
00040: 020040 026455 000000 026440 026455 026455 026455 047506
00050: 000000 043040 055117 047515 020040 020040 000000 020040
00060: 046501 043516 044506 044503 000000 040524 143262 034000
00070: 142461 044517 000000 047040 000000 000000 000000 000000
00100: SAME: TO 000200-1


*T RECORD 1162 (%2212, #48A)
00000: 036000 060156 154102 010210 000000 050111 041524 052522
00010: 042472 020130 000000 026515 040507 027040 020131 026515
00020: 000000 040507 027040 046501 051513 035040 000000 020040
00030: 020130 026515 040507 027040 000000 020131 026515 040507
00040: 027040 050101 000000 043505 027506 044514 042440 042111
00050: 000000 051520 046101 054505 042040 020040 000000 020040
00060: 043111 046105 020104 044523 000000 050114 040531 042504
00070: 020040 020040 000000 020040 000000 000000 000000 000000
00100: SAME: TO 000200-1


*T RECORD 1163 (%2213, #48B)
00000: 036000 060156 016164 010266 000000 020040 020040 043125
00010: 047103 052111 000000 047516 020040 020040 076233 034000
00020: 000000 142551 020040 020040 020040 020040 000000 020040
00030: 020040 046456 042105 047123 000000 027072 020103 020040
00040: 020115 020040 000000 020131 020040 020102 020040 051117
00050: 000000 052101 052111 047516 035040 050111 000000 041524
00060: 052522 042440 020115 040523 000000 045440 042105 043522
00070: 042505 051440 000000 022440 000000 000000 000000 000000
```

```
00100: SAME: TO 000200-1


*T RECORD 1164 (%2214, #48C)
00000: 030000 060144 164710 010344 000000 020040 020040 020040
00010: 022440 020040 000000 020040 020040 020040 030440 031040
00020: 000000 040503 052111 053105 020110 047523 000000 052072
00030: 020040 037477 037477 037477 000000 037477 072010 005400
00040: 142641 037477 000000 020040 020040 020040 020040 020040
00050: 000000 037477 037477 037477 037477 037477 000000 160673
00060: 000000 000000 000000 000000 000000 000000 000000 000000
00070: SAME: TO 000200-1


*T RECORD 1165 (%2215, #48D)
00000: 002000 120000 120000 000000 000000 000000 000000 000000
00010: SAME: TO 000200-1


*T RECORD 1166 (%2216, #48E)
00000: 025000 020000 014304 077101 047107 046040 001536 000000
00010: SAME: TO 000020-1
00020: 000000 020105 023101 047107 046072 034072 031460 030062
00030: 020040 026101 047107 046105 020115 042501 051525 051105
00040: 046505 047124 051440 036070 033461 031060 033056 030461
00050: 032065 037040 000000 000000 000000 000000 000000 000000
00060: SAME: TO 000200-1


*T RECORD 1167 (%2217, #48F)
00000: 003400 040001 054211 077101 047107 046000 000000 000000
00010: SAME: TO 000200-1


*T RECORD 1168 (%2220, #490)
00000: 036000 060156 160611 000000 000000 001535 034001 024443
00010: 031760 142655 000000 000440 017340 033760 140100 000442
00020: 000000 017000 103760 000000 000440 017000 000000 061560
00030: 000000 000500 017070 031760 000000 142654 000040 017360
00040: 043260 024453 000000 020441 005030 023760 000000 000441
00050: 000000 017000 033760 040200 000442 017000 000000 031760
00060: 142735 000440 017360 033760 000000 000002 000440 017000
00070: 001560 134721 000000 000440 000000 000000 000000 000000
00100: SAME: TO 000200-1


*T RECORD 1169 (%2221, #491)
00000: 036000 060156 145630 000056 000000 017340 033760 000000
00010: 000500 017140 000000 033760 000000 000503 017000 111563
00020: 000000 000400 000440 017030 143413 034001 000000 024461
00030: 101760 142736 000440 017360 000000 111560 000300 000440
00040: 017270 033760 000000 000003 000440 017000 031760 145703
00050: 000000 000440 017340 033760 000000 000503 000000 017000
00060: 111563 001000 000440 017000 000000 031460 024474 020040
00070: 005000 111563 000000 003400 000000 000000 000000 000000
00100: SAME: TO 000200-1


*T RECORD 1170 (%2222, #492)
00000: 036000 060156 031564 000134 000000 000440 017000 031460
00010: 024474 020040 000000 005000 111563 003000 000440 017000
00020: 000000 031460 024475 120040 005000 033760 000000 000053
00030: 000440 017000 031760 101362 000000 000440 017300 001560
00040: 100001 000440 000000 017070 020064 034001 024477 001560
00050: 000000 074402 000440 017340 033760 037477 000000 000440
```

273

```
00060: 017000 041560 000000 000500 000000 017030 031562 000000
00070: 000500 017070 000000 031461 000000 000000 000000 000000
00100: SAME: TO 000200-1


*T RECORD 1171 (%2223, #493)
00000: 036000 060156 170745 000212 000000 000000 000440 017030
00010: 031760 142701 000000 000040 017360 031460 000000 120040
00020: 000000 007000 031760 142656 000440 017340 000000 021760
00030: 000000 000500 017000 024516 000000 024521 020040 002000
00040: 033760 142701 000000 000440 017000 031460 024616 000040
00050: 000000 006000 033760 142754 000440 017000 000000 031460
00060: 002745 000040 006000 014631 000000 034001 024515 031460
00070: 000000 000040 000000 007000 000000 000000 000000 000000
00100: SAME: TO 000200-1


*T RECORD 1172 (%2224, #494)
00000: 036000 060156 014013 000270 000000 030760 000057 005440
00010: 017000 031460 000000 030562 000040 006000 031460 024511
00020: 000000 000040 016000 030760 000057 005440 000000 017000
00030: 031460 030562 000040 006000 000000 033760 000001 000441
00040: 017000 031760 000000 142656 000440 017340 061561 000000
00050: 000000 000500 017070 031760 142657 000040 000000 017340
00060: 033760 000000 000102 017140 000000 033760 024537 020503
00070: 005000 031760 000000 101376 000000 000000 000000 000000
00100: SAME: TO 000200-1


*T RECORD 1173 (%2225, #495)
00000: 036000 060156 042741 000346 000000 000440 017340 031760
00010: 142657 000440 000000 017360 055461 034001 024533 031760
00020: 000000 101377 000440 017340 031760 142660 000000 000440
00030: 017360 033760 000002 000443 000000 017000 033760 000002
00040: 000442 017000 000000 031462 000000 000440 017030 031760
00050: 000000 101376 000440 017360 031463 000000 000000 000440
00060: 007170 033760 000005 000440 000000 017000 031760 000141
00070: 000440 017340 000000 033760 000000 000000 000000 000000
00100: SAME: TO 000200-1


*T RECORD 1174 (%2226, #496)
00000: 036000 060156 023511 000424 000000 000000 000502 017000
00010: 101560 133777 000000 000440 017340 121562 000000 000500
00020: 000000 017000 043260 024551 020441 005000 000000 011462
00030: 030454 000440 006070 040777 000000 034001 024551 031760
00040: 142655 000440 000000 017340 031760 000000 000500 017000
00050: 000000 031460 024615 020040 005000 031760 000000 142654
00060: 000440 017340 031760 000000 000000 000500 017000 041260
00070: 024615 020440 000000 005070 000000 000000 000000 000000
00100: SAME: TO 000200-1


*T RECORD 1175 (%2227, #497)
00000: 036000 060156 113445 000502 000000 031760 142735 000440
00010: 017340 037760 000000 000264 000452 017002 031760 000000
00020: 000000 000500 017000 031460 024565 014040 000000 005000
00030: 121572 000000 000500 017030 000000 031460 024563 114040
00040: 005000 003572 000000 000000 000500 017070 031460 024565
00050: 000000 014040 005000 152122 034001 024567 000000 031460
00060: 014744 000040 006000 033760 000000 043575 000442 017000
00070: 033760 015767 000000 000443 000000 000000 000000 000000
00100: SAME: TO 000200-1
```

```
*T RECORD 1176 (%2230, #498)
00000: 036000 060156 126026 000560 000000 017000 031460 015112
00010: 000040 006000 000000 031460 000000 000440 017030 033461
00020: 000000 000000 000512 015000 031460 024732 000000 000040
00030: 006000 031760 142731 000440 000000 017300 031460 000000
00040: 000440 017070 000000 031461 000000 000440 017170 033472
00050: 000000 000000 000441 011000 033760 024733 000000 000400
00060: 006000 031760 142733 000440 000000 017300 031460 000000
00070: 000440 017070 000000 160076 000000 000000 000000 000000
00100: SAME: TO 000200-1

*T RECORD 1177 (%2231, #499)
00000: 036000 060156 146664 000636 000000 034001 024605 031461
00010: 000000 000440 000000 017170 033760 142701 000440 017300
00020: 000000 041260 024616 000440 006070 033760 000000 142701
00030: 000440 017300 021760 000000 000000 000440 017070 031460
00040: 024616 000040 000000 006000 033760 142740 000440 017000
00050: 000000 031460 014073 000040 006000 031460 000000 000000
00060: 000040 007000 031460 000000 000000 000440 017340 031460
00070: 000000 000120 000000 015000 000000 000000 000000 000000
00100: SAME: TO 000200-1

*T RECORD 1178 (%2232, #49A)
00000: 036000 060156 103512 000714 000000 031760 142727 000440
00010: 017360 031760 000000 000000 000500 017160 031460 024631
00020: 000000 120040 006000 125007 034001 024623 000000 031460
00030: 000000 000040 011000 103760 000000 024716 000400 006000
00040: 103760 024716 000000 000400 006000 103760 024716 000400
00050: 000000 006000 103760 024716 000400 006000 000000 031460
00060: 000000 000040 007000 033760 000000 000016 000457 017000
00070: 001577 142661 000000 000440 000000 000000 000000 000000
00100: SAME: TO 000200-1

*T RECORD 1179 (%2233, #49B)
00000: 036000 060156 174004 000772 000000 017340 033760 000000
00010: 000500 017140 000000 033760 000000 000501 017000 031460
00020: 000000 024651 000040 006000 031760 142736 000000 000440
00030: 017340 033760 000261 000442 000000 017000 031460 024710
00040: 000040 006000 000000 156753 034001 024641 003561 000000
00050: 000000 000501 017140 023760 000400 000442 000000 017000
00060: 031460 024710 000040 006000 000000 101577 142701 000440
00070: 017300 001560 000000 000000 000000 000000 000000 000000
00100: SAME: TO 000200-1

*T RECORD 1180 (%2234, #49C)
00000: 036000 060156 176664 001050 000000 000500 017070 031461
00010: 000000 000440 000000 017170 113577 000002 000457 017000
00020: 000000 024632 000000 014040 003000 123561 000000 000300
00030: 000453 017000 113560 000400 000000 000452 017000 033473
00040: 014744 000440 000000 006000 031760 142733 000440 017340
00050: 000000 033760 000000 000502 017140 033760 000000 015112
00060: 000503 006000 106447 034001 000000 024657 033460 000000
00070: 000454 017000 000000 033461 000000 000000 000000 000000
00100: SAME: TO 000200-1

*T RECORD 1181 (%2235, #49D)
00000: 036000 060156 033650 001126 000000 000000 000455 017000
```

275

```
00010: 033472 014744 000000 000440 006000 031760 142731 000440
00020: 000000 017340 033760 000000 000502 017140 000000 033760
00030: 015112 000503 006000 033474 000000 000000 000442 017000
00040: 033475 015024 000000 000443 006000 031460 014747 000040
00050: 000000 006000 123560 000300 000456 017000 000000 033473
00060: 014744 000440 006000 031760 000000 142731 000440 017340
00070: 033760 000000 000000 000502 000000 000000 000000 000000
00100: SAME: TO 000200-1


*T RECORD 1182 (%2236, #49E)
00000: 036000 060156 037330 001204 000000 017140 033760 015112
00010: 000503 006000 000000 004775 034001 024675 033460 000000
00020: 000000 000454 017000 033461 000000 000455 000000 017000
00030: 033472 014744 000440 006000 000000 031760 142733 000440
00040: 017340 033760 000000 000000 000502 017140 033760 015112
00050: 000000 000503 006000 033474 000000 000442 000000 017000
00060: 033475 015027 000443 006000 000000 031460 014747 000040
00070: 006000 003560 000000 000400 000000 000000 000000 000000
00100: SAME: TO 000200-1


*T RECORD 1183 (%2237, #49F)
00000: 036000 060156 166562 001262 000000 000440 017000 033476
00010: 000000 000441 000000 007000 121562 000000 000500 017000
00020: 000000 031460 024713 040040 005000 031462 000000 000000
00030: 000440 007070 026741 034001 000000 024713 001562 000000
00040: 000500 017000 000000 031460 000000 114040 007000 121462
00050: 000000 000000 000440 007070 031460 000000 000000 000440
00060: 017340 033760 000000 000501 000000 017140 033760 000000
00070: 000502 017140 000000 033760 000000 000000 000000 000000
00100: SAME: TO 000200-1


*T RECORD 1184 (%2240, #4A0)
00000: 036000 060156 175504 001340 000000 000000 000503 017140
00010: 031460 000000 000000 000120 015000 033760 142722 000440
00020: 000000 017000 031760 142726 000440 017360 000000 031463
00030: 000000 000440 017270 031462 000000 000000 000440 017270
00040: 031461 003145 000000 000440 006270 031460 000000 000040
00050: 000000 011000 164510 002001 024731 031460 000000 000000
00060: 000040 007000 065451 034000 000000 142654 000001 000000
00070: SAME: TO 000200-1


*T RECORD 1185 (%2241, #4A1)
00000: 036000 060156 170650 001416 000000 000400 177300 000400
00010: 001300 177200 000000 000300 001600 000300 000400 000274
00020: 000000 000421 000274 000421 000274 000421 000000 000300
00030: 000000 000000 000000 000000 000000 000000 000000 000000
00040: SAME: TO 000050-1
00050: 000000 000000 000000 000000 100005 000000 000000 000000
00060: SAME: TO 000200-1


*T RECORD 1186 (%2242, #4A2)
00000: 026400 060142 160445 001474 000000 000000 100004 000264
00010: 000545 000001 000000 152767 014400 142744 000024 142763
00020: 000000 000410 000545 000001 030003 142735 000000 177777
00030: 100004 000264 000214 000545 000000 000014 000000 000000
00040: 041522 047523 000000 051440 040516 043514 042472 020040
00050: 000000 020040 042105 043456 103071 000000 000000 000000
00060: SAME: TO 000200-1
```

276

*T RECORD 1187 (%2243, #4A3)
00000: 002000 120000 120000 000000 000000 000000 000000 000000
00010: SAME: TO 000200-1

*T RECORD 1188 (%2244, #4A4)
00000: 025000 020000 073044 077124 051107 043040 001320 000000
00010: SAME: TO 000020-1
00020: 000000 020124 051111 043517 047117 046505 052122 044503
00030: 020106 052516 041524 044517 047123 020074 034064 030070
00040: 030462 037040 020040 020040 020040 020040 020040 020040
00050: 020040 020040 000000 000000 000000 000000 000000 000000
00060: SAME: TO 000200-1

*T RECORD 1189 (%2245, #4A5)
00000: 003400 040001 053234 077124 051107 043000 000000 000000
00010: SAME: TO 000200-1

*T RECORD 1190 (%2246, #4A6)
00000: 036000 060156 044100 000000 000000 001317 034001 024732
00010: 043260 024734 000000 000457 016000 033760 000002 000457
00020: 000000 017000 031460 000000 000440 017000 000000 024737
00030: 025033 014040 002000 123577 000000 000004 000457 017000
00040: 033460 000000 000000 000455 017000 033461 000000 000456
00050: 000000 017000 033760 050574 000442 017000 000000 033760
00060: 141002 000443 017000 031460 000000 015112 000040 006000
00070: 031460 014747 000000 000040 000000 000000 000000 000000
00100: SAME: TO 000200-1

*T RECORD 1191 (%2247, #4A7)
00000: 036000 060156 143244 000056 000000 006000 003160 000000
00010: 000457 017000 000000 123460 014744 000440 006000 033760
00020: 000000 062207 000442 017000 064156 034001 000000 024750
00030: 033760 166400 000443 017000 000000 031460 015112 000040
00040: 006000 033475 000000 000000 000442 017000 033476 015024
00050: 000000 000443 006000 043577 000007 000457 000000 017000
00060: 033460 024762 144442 005000 000000 033461 000000 000443
00070: 017000 033760 000000 062207 000000 000000 000000 000000
00100: SAME: TO 000200-1

*T RECORD 1192 (%2250, #4A8)
00000: 036000 060156 166213 000134 000000 000440 017000 033760
00010: 166400 000441 000000 017000 031460 015027 000040 006000
00020: 000000 033460 000000 000453 017000 033461 000000 000000
00030: 000454 017000 033460 000000 000000 000442 017000 033461
00040: 015112 000443 000000 006000 024155 034001 024766 033460
00050: 000000 000000 000455 017000 033461 000000 000000 000456
00060: 017000 100477 000000 000440 000000 017000 041660 000002
00070: 000440 017000 000000 031460 000000 000000 000000 000000
00100: SAME: TO 000200-1

*T RECORD 1193 (%2251, #4A9)
00000: 036000 060156 012214 000212 000000 025000 120040 005000
00010: 031760 142775 000000 000440 017340 033760 025005 000502
00020: 000000 006140 033473 000000 000442 017000 000000 033474
00030: 015112 000443 006000 031460 000000 025002 000040 016000
00040: 031760 143005 000000 000440 017340 033760 025005 000502
00050: 000000 006140 041577 000004 000440 017000 000000 031460

277

```
00060: 025033 120040 006000 107251 000000 034001 025004 031460
00070: 000000 000040 000000 007000 000000 000000 000000 000000
00100: SAME: TO 000200-1

*T RECORD 1194 (%2252, #4AA)
00000: 036000 060156 011542 000270 000000 033760 015112 000503
00010: 006000 033760 000000 040000 003442 017035 033760 015024
00020: 000000 000503 006000 033475 000000 000442 000000 017000
00030: 033476 015112 000443 006140 000000 033760 000000 000502
00040: 017140 033760 000000 015112 000503 006000 033760 040000
00050: 000000 003442 017035 033760 015024 000503 000000 006000
00060: 033475 000000 000442 017000 000000 033476 015112 000443
00070: 006140 033760 000000 000000 000000 000000 000000 000000
00100: SAME: TO 000200-1

*T RECORD 1195 (%2253, #4AB)
00000: 036000 060156 144533 000346 000000 000502 017140 033760
00010: 015112 000503 000000 006000 116257 034001 025022 033760
00020: 000000 040000 003442 017035 033760 015024 000000 000503
00030: 006000 033475 000000 000442 000000 017000 033476 015112
00040: 000443 006140 000000 033760 000000 000502 017140 033760
00050: 000000 015112 000503 006000 033760 040000 000000 003442
00060: 017035 033760 015024 000503 000000 006000 031460 000000
00070: 000040 007000 000000 041561 000000 000000 000000 000000
00100: SAME: TO 000200-1

*T RECORD 1196 (%2254, #4AC)
00000: 036000 060156 040353 000424 000000 177400 000440 017000
00010: 033461 025042 000000 120443 005000 041560 037400 000440
00020: 000000 017000 033460 025042 120442 005000 000000 043260
00030: 000000 020441 007000 061243 000000 034001 025040 043260
00040: 015027 000440 000000 006000 031460 000000 000040 007000
00050: 000000 063560 177777 000440 017000 063561 000000 177400
00060: 000441 017000 003561 000400 000000 000441 017000 031460
00070: 000000 124040 000000 007000 000000 000000 000000 000000
00100: SAME: TO 000200-1

*T RECORD 1197 (%2255, #4AD)
00000: 036000 060156 111723 000502 000000 103460 000000 000440
00010: 007000 033760 000000 177777 000457 017000 033461 000000
00020: 000000 000456 017000 033460 025103 044455 000000 005700
00030: 031460 000000 000140 015000 000000 031460 025033 014040
00040: 006000 033460 000000 000000 000455 017000 033461 000000
00050: 000000 000456 017000 066076 034001 025056 000000 041561
00060: 000374 000440 017000 033460 000000 025076 120442 005000
00070: 031460 025145 000000 020040 000000 000000 000000 000000
00100: SAME: TO 000200-1

*T RECORD 1198 (%2256, #4AE)
00000: 036000 060156 023170 000560 000000 005000 033760 040000
00010: 000442 017000 000000 033760 000002 000443 017000 031460
00020: 000000 015024 000040 006000 033460 000000 000000 000450
00030: 017000 033461 000000 000451 000000 017000 033760 040000
00040: 000440 017000 000000 033760 000002 000441 017000 033475
00050: 000000 000000 000442 017000 033476 015027 000000 000443
00060: 006000 033470 000000 000442 000000 017000 033471 015140
00070: 000443 006000 000000 067115 000000 000000 000000 000000
00100: SAME: TO 000200-1
```

```
*T RECORD 1199 (%2257, #4AF)
00000: 036000 060156 142755 000636 000000 034001 025074 033760
00010: 166377 000457 000000 017000 031460 025103 000040 016000
00020: 000000 033461 000000 000443 017000 033760 000000 040000
00030: 000440 017000 033760 000002 000000 000441 017000 031460
00040: 015140 000040 000000 006000 033760 166401 000457 017000
00050: 000000 033460 000000 000455 017000 033461 000000 000000
00060: 000456 017000 033460 000000 000000 000442 017000 033461
00070: 015112 000443 000000 006000 000000 000000 000000 000000
00100: SAME: TO 000200-1

*T RECORD 1200 (%2260, #4B0)
00000: 036000 060156 077000 000714 000000 033760 040257 000442
00010: 017000 033760 000000 154404 000443 017000 031760 143015
00020: 000000 000440 017300 006625 034001 025112 000000 031460
00030: 000000 000440 017070 031461 000000 015024 000440 006170
00040: 033460 000000 000000 000442 017000 033461 000000 000443
00050: 000000 017000 033760 132062 000440 017000 000000 033760
00060: 134406 000441 017000 031460 000000 015140 000040 006000
00070: 031760 143015 000000 000440 000000 000000 000000 000000
00100: SAME: TO 000200-1

*T RECORD 1201 (%2261, #4B1)
00000: 036000 060156 005402 000772 000000 017340 033760 000000
00010: 000502 017140 000000 033760 015024 000503 006000 033760
00020: 000000 047407 000442 017000 033760 173775 000000 000443
00030: 017000 031460 015112 000040 000000 006000 033760 053447
00040: 000442 017000 000000 143460 034001 025130 033760 014002
00050: 000000 000443 017000 031460 015024 000040 000000 006000
00060: 033460 000000 000442 017000 000000 033461 000000 000443
00070: 017000 033475 000000 000000 000000 000000 000000 000000
00100: SAME: TO 000200-1

*T RECORD 1202 (%2262, #4B2)
00000: 036000 060156 060724 001050 000000 000440 017000 033476
00010: 015140 000441 000000 006000 103477 000000 000457 017000
00020: 000000 031460 025145 020040 005000 033760 000000 062207
00030: 000442 017000 033477 015027 000000 000443 006000 031460
00040: 000000 000040 000000 011000 031760 000000 000400 017000
00050: 000000 031460 025033 114040 006000 031460 000000 000000
00060: 000040 007000 073703 034001 000000 025146 031162 000000
00070: 000443 017000 000000 031160 000000 000000 000000 000000
00100: SAME: TO 000200-1

*T RECORD 1203 (%2263, #4B3)
00000: 036000 060156 006477 001126 000000 025160 120441 005000
00010: 031460 025177 000000 020440 005000 031460 025155 014040
00020: 000000 005000 033760 062207 000440 017000 000000 033760
00030: 166402 000441 017000 031460 000000 025177 000040 016000
00040: 033760 045545 000000 000440 017000 033760 171006 000441
00050: 000000 017000 031460 025177 000040 016000 000000 031462
00060: 000000 000440 017030 031460 000000 000000 000100 015000
00070: 031460 015140 000000 000040 000000 000000 000000 000000
00100: SAME: TO 000200-1

*T RECORD 1204 (%2264, #4B4)
00000: 036000 060156 164134 001204 000000 006000 031460 025047
```

```
00010: 000040 006000 000000 147135 030001 025164 033760 062207
00020: 000000 000457 017000 031460 000000 000040 000000 011000
00030: 031760 000000 000400 017000 000000 031460 025173 114040
00040: 005000 033760 000000 166404 000443 017000 033477 015024
00050: 000000 000442 006000 031460 025177 000040 000000 016000
00060: 031460 000000 000440 017000 000000 031460 025177 114040
00070: 005000 033760 000000 166406 000000 000000 000000 000000
00100: SAME: TO 000200-1


*T RECORD 1205 (%2265, #4B5)
00000: 024000 060136 102157 001262 000000 000443 017000 033477
00010: 015024 000442 000000 006000 031460 000000 000040 007000
00020: 000000 150175 010000 142775 107070 161765 000000 117171
00030: 164367 114631 115371 125252 000000 125775 133333 067367
00040: 135673 136371 000000 125252 125773 100000 000377 140375
00050: 000000 000000 000000 000000 000000 000000 000000 000000
00060: SAME: TO 000200-1


*T RECORD 1206 (%2266, #4B6)
00000: 002000 120000 120000 000000 000000 000000 000000 000000
00010: SAME: TO 000200-1


*T RECORD 1207 (%2267, #4B7)
00000: 025000 020000 160427 077111 047504 051040 003216 000000
00010: SAME: TO 000020-1
00020: 000000 020111 027517 020104 051111 053105 051040 044517
00030: 047111 020074 034065 030063 031066 027060 034462 032476
00040: 020040 020040 020040 020040 020040 020040 020040 020040
00050: 020040 020040 000000 000000 000000 000000 000000 000000
00060: SAME: TO 000200-1


*T RECORD 1208 (%2270, #4B8)
00000: 003400 040001 057616 077111 047504 051000 000000 000000
00010: SAME: TO 000200-1


*T RECORD 1209 (%2271, #4B9)
00000: 036000 060156 145323 000000 000000 003215 034001 025200
00010: 031460 025732 000000 000040 006000 031460 002463 000440
00020: 000000 006300 031460 000000 000040 017140 000000 033561
00030: 000000 000501 017140 033760 000000 000000 000512 017140
00040: 031460 025262 000000 020040 005000 033562 000000 000502
00050: 000000 017140 033760 000000 000513 017140 000000 031460
00060: 025262 020040 005000 033760 000000 000000 000514 017140
00070: 033760 000000 000000 000517 000000 000000 000000 000000
00100: SAME: TO 000200-1


*T RECORD 1210 (%2272, #4BA)
00000: 036000 060156 160362 000056 000000 017000 041563 000300
00010: 001440 017036 000000 033760 016000 022444 017000 033760
00020: 000000 000160 000446 017000 116742 034001 000000 025216
00030: 023760 000000 000500 017000 000000 031474 000000 000440
00040: 017000 031460 000000 025225 121040 005000 031460 025223
00050: 000000 054040 005000 033760 010000 000444 000000 017000
00060: 033760 000040 000446 017000 000000 043260 025235 000447
00070: 016000 031460 000000 025230 000000 000000 000000 000000
00100: SAME: TO 000200-1


*T RECORD 1211 (%2273, #4BB)
```

```
00000: 036000 060156 114153 000134 000000 054040 005000 001560
00010: 143023 000440 000000 017340 033760 000000 000506 017000
00020: 000000 033463 000000 000447 017000 033462 000000 000000
00030: 000450 017000 033461 000000 000000 000451 017000 033760
00040: 004000 000444 000000 017000 036543 034001 025234 043260
00050: 000000 000000 000443 017000 031460 003672 000000 000040
00060: 006000 031760 000076 006440 000000 017300 031463 000000
00070: 000440 017070 000000 031460 000000 000000 000000 000000
00100: SAME: TO 000200-1

*T RECORD 1212 (%2274, #4BC)
00000: 036000 060156 066154 000212 000000 025615 000040 006000
00010: 111563 000300 000000 000440 017000 031460 025245 020040
00020: 000000 005000 111567 000300 000440 017000 000000 031460
00030: 025246 120040 005000 037472 000000 000000 000452 017002
00040: 033472 000000 000000 000441 017000 011477 000000 000440
00050: 000000 017300 031460 025253 050040 005000 000000 031460
00060: 000000 014040 017440 172717 000000 034001 025252 031460
00070: 025255 000040 000000 016160 000000 000000 000000 000000
00100: SAME: TO 000200-1

*T RECORD 1213 (%2275, #4BD)
00000: 036000 060156 126237 000270 000000 031460 000000 000040
00010: 017140 031460 000000 000000 014040 017460 013461 000000
00020: 000000 000441 017000 031460 025250 120040 000000 005000
00030: 033472 000000 000441 017000 000000 013473 000000 000453
00040: 017000 031460 000000 025250 120040 005000 031460 025763
00050: 000000 000040 006000 031460 000000 000040 000000 007000
00060: 031475 000000 005440 017000 000000 031460 025313 014040
00070: 005000 031473 000000 000000 000000 000000 000000 000000
00100: SAME: TO 000200-1

*T RECORD 1214 (%2276, #4BE)
00000: 036000 060156 061604 000346 000000 000440 017000 031460
00010: 025313 014040 000000 005000 107713 034001 025270 031476
00020: 000000 000000 000440 017000 031460 025274 000000 114040
00030: 005000 003176 000000 000455 000000 017000 043260 025301
00040: 000456 016000 000000 111576 001000 000440 017030 031460
00050: 000000 025313 114040 005000 001575 000000 000000 000500
00060: 017030 031460 025301 040040 000000 005000 113575 000000
00070: 000515 017000 000000 031474 000000 000000 000000 000000
00100: SAME: TO 000200-1

*T RECORD 1215 (%2277, #4BF)
00000: 036000 060156 072514 000424 000000 000000 000440 017000
00010: 031460 025305 000000 114040 005000 003173 000000 000454
00020: 000000 017000 043260 025312 000454 016000 000000 111574
00030: 000600 000440 017030 021337 000000 034001 025306 031460
00040: 025313 114040 000000 005000 001573 000000 000500 017030
00050: 000000 031460 025312 040040 005000 113573 000000 000000
00060: 000513 017000 031460 000000 000000 000040 007000 031460
00070: 000000 001040 000000 007000 000000 000000 000000 000000
00100: SAME: TO 000200-1

*T RECORD 1216 (%2300, #4CO)
00000: 036000 060156 040437 000502 000000 031460 025732 000040
00010: 006000 031460 000000 000000 000440 017300 103760 000000
00020: 000000 000440 017000 023760 000000 000444 000000 017000
```

```
00030: 043260 025510 000445 006000 000000 031460 002463 000040
00040: 006000 031460 000000 000000 000040 017140 033760 000000
00050: 000000 000516 017140 045200 034001 025324 000000 033760
00060: 000000 000512 017140 031460 000000 025460 020040 005000
00070: 033562 000000 000000 000502 000000 000000 000000 000000
00100: SAME: TO 000200-1


*T RECORD 1217 (%2301, #4C1)
00000: 036000 060156 013100 000560 000000 017140 103760 000000
00010: 000453 017000 000000 033760 000000 000514 015140 033760
00020: 000000 000000 121517 017000 033472 000000 000000 000454
00030: 017000 003176 000000 000454 000000 017000 043574 007760
00040: 000454 017000 000000 043576 000017 000455 017000 043576
00050: 000000 007760 000456 017000 031472 000000 000000 000440
00060: 017030 040260 000000 000500 000000 015000 004175 000000
00070: 000452 017003 000000 176002 000000 000000 000000 000000
00100: SAME: TO 000200-1


*T RECORD 1218 (%2302, #4C2)
00000: 036000 060156 077476 000636 000000 034001 025342 034472
00010: 000001 000652 000000 017003 031260 000000 000440 017000
00020: 000000 003452 000000 120452 017000 033760 000000 016000
00030: 000444 017000 033760 000040 000000 000446 017000 043260
00040: 003672 000447 000000 006000 031760 000076 000440 017300
00050: 000000 031463 000000 000440 017070 031460 000000 025403
00060: 050040 005000 033176 000000 000000 000441 017000 031460
00070: 025615 002040 000000 006000 000000 000000 000000 000000
00100: SAME: TO 000200-1


*T RECORD 1219 (%2303, #4C3)
00000: 036000 060156 023551 000714 000000 031460 000000 000040
00010: 011000 033760 000000 000000 000401 011000 011477 000000
00020: 000000 000440 017300 124221 034001 025360 000000 033475
00030: 000000 014445 017440 033760 000000 000000 000500 017000
00040: 123575 000020 000000 000444 017000 121161 000000 000444
00050: 000000 017000 031460 025366 140040 005000 000000 033461
00060: 000000 000444 017000 113164 000000 000000 000441 017000
00070: 043260 025510 000000 000455 000000 000000 000000 000000
00100: SAME: TO 000200-1


*T RECORD 1220 (%2304, #4C4)
00000: 036000 060156 164632 000772 000000 006000 031465 000000
00010: 000440 017000 000000 031460 025373 020040 005000 031460
00020: 000000 000000 000440 017170 031461 000000 000000 000440
00030: 017000 031460 025360 120040 000000 005000 043260 000000
00040: 000440 017000 000000 015406 034001 025376 033760 177776
00050: 000000 000444 017000 043260 025510 000445 000000 006000
00060: 031465 000000 000440 017000 000000 031460 025460 020040
00070: 005000 031460 000000 025460 000000 000000 000000 000000
00100: SAME: TO 000200-1


*T RECORD 1221 (%2305, #4C5)
00000: 036000 060156 136524 001050 000000 000440 016170 031475
00010: 000000 000440 000000 017000 031460 025462 120040 006000
00020: 000000 031260 000000 000440 017000 031460 000000 025475
00030: 120040 006000 033760 004000 000000 000444 017000 033760
00040: 000160 000446 000000 017000 033463 000000 000447 017000
00050: 000000 033462 000000 000450 017000 033461 000000 000000
```

```
00060: 000451 017000 145336 034001 000000 025414 033176 000000
00070: 000451 017000 000000 043260 000000 000000 000000 000000
00100: SAME: TO 000200-1

*T RECORD 1222 (%2306, #4C6)
00000: 036000 060156 076453 001126 000000 025615 002443 006000
00010: 031460 000000 000000 000040 011000 033760 000000 000401
00020: 000000 011000 033760 000000 000414 017000 000000 111574
00030: 000003 000440 017000 031460 000000 025424 022040 005000
00040: 011477 000000 000000 000440 017300 031475 000000 000440
00050: 000000 017000 031460 025433 020040 005000 000000 031760
00060: 143017 000440 017340 033760 000000 000000 000500 017000
00070: 033475 000000 000000 000444 000000 000000 000000 000000
00100: SAME: TO 000200-1

*T RECORD 1223 (%2307, #4C7)
00000: 036000 060156 102220 001204 000000 017000 043260 025510
00010: 000445 006000 000000 077347 034001 025432 011477 000000
00020: 000000 000440 017300 031460 025435 154040 000000 005000
00030: 031477 025436 000440 016030 000000 031460 000000 000040
00040: 017140 033760 000000 000000 000500 017000 033760 000020
00050: 000000 000444 017000 121161 000000 000444 000000 017000
00060: 043260 025443 140445 005000 000000 033461 000000 000444
00070: 017000 031460 000000 025510 000000 000000 000000 000000
00100: SAME: TO 000200-1

*T RECORD 1224 (%2310, #4C8)
00000: 036000 060156 115535 001262 000000 000040 006000 031465
00010: 000000 000440 000000 017000 031460 025447 020040 005000
00020: 000000 031460 000000 014440 017470 113561 000000 000020
00030: 000441 017000 153257 034001 000000 025450 031460 025433
00040: 140040 005000 000000 031760 143020 000440 017340 033760
00050: 000000 000000 000500 017000 033760 177776 000000 000444
00060: 017000 043260 025510 000445 000000 006000 031465 000000
00070: 000440 017000 000000 031460 000000 000000 000000 000000
00100: SAME: TO 000200-1

*T RECORD 1225 (%2311, #4C9)
00000: 036000 060156 015710 001340 000000 025460 020040 005000
00010: 031460 000000 000000 014440 017470 031460 025763 000040
00020: 000000 006000 031460 000000 000040 007000 000000 031472
00030: 000000 000440 017030 031461 000000 000000 000500 015030
00040: 031460 000000 000000 000100 015000 103760 000000 000452
00050: 000000 017000 021547 034001 025466 033176 000000 000000
00060: 000441 017000 031460 025615 000000 002040 006000 031460
00070: 000000 014040 000000 017440 000000 000000 000000 000000
00100: SAME: TO 000200-1

*T RECORD 1226 (%2312, #4CA)
00000: 036000 060156 060421 001416 000000 031760 143017 000440
00010: 017360 031460 000000 000000 000040 011000 033760 000000
00020: 000000 000401 011000 033760 000000 000412 000000 007000
00030: 031472 000000 000440 017030 000000 031461 000000 000500
00040: 015030 031460 000000 000000 000100 015000 103760 000000
00050: 000000 000452 017000 033174 000000 000441 000000 017000
00060: 031460 025615 002040 006000 000000 031460 000000 014040
00070: 017440 007733 000000 034001 000000 000000 000000 000000
00100: SAME: TO 000200-1
```

```
*T RECORD 1227 (%2313, #4CB)
00000: 036000 060156 011202 001474 000000 025504 031760 143020
00010: 000440 017360 000000 031460 000000 000040 011000 033760
00020: 000000 000000 000401 011000 033760 000000 000000 000412
00030: 007000 031460 000000 000120 000000 015000 031760 143021
00040: 000440 017340 000000 030760 000000 000500 017140 031464
00050: 000000 000000 000440 017000 031460 025526 000000 140040
00060: 005000 031460 025552 020040 000000 005000 101464 000000
00070: 000440 017000 000000 031460 000000 000000 000000 000000
00100: SAME: TO 000200-1

*T RECORD 1228 (%2314, #4CC)
00000: 036000 060156 015204 001552 000000 025522 120040 005000
00010: 031760 000020 000000 000440 017070 031460 025552 000040
00020: 000000 016000 051134 034001 025522 033760 000000 000000
00030: 000504 017000 033760 000020 000000 000445 017000 113565
00040: 000000 000505 000000 017000 031460 025552 020040 005000
00050: 000000 031465 000000 000440 017000 031460 000000 025533
00060: 020040 005000 037460 000000 000000 000440 017002 013465
00070: 000000 000445 000000 017000 000000 000000 000000 000000
00100: SAME: TO 000200-1

*T RECORD 1229 (%2315, #4CD)
00000: 036000 060156 056546 001630 000000 031460 025527 120040
00010: 005000 036460 000000 000000 000440 017001 021760 000000
00020: 000000 000500 017030 031460 025542 120040 000000 005000
00030: 031260 000000 000440 017030 000000 031460 000000 000100
00040: 015000 154425 000000 034001 025540 103760 000000 000445
00050: 000000 017000 031760 000020 000440 017030 000000 013464
00060: 000000 000444 017000 031460 000000 025533 120040 005000
00070: 031460 000000 000000 000040 000000 000000 000000 000000
00100: SAME: TO 000200-1

*T RECORD 1230 (%2316, #4CE)
00000: 036000 060156 026654 001706 000000 017060 031260 000000
00010: 000440 017270 000000 031465 000000 000440 017000 031460
00020: 000000 025552 020040 005000 031460 000000 000000 000040
00030: 011000 033760 000000 000400 000000 017000 031460 000000
00040: 000040 011000 000000 031760 000000 000400 007300 031460
00050: 000000 025732 000040 006000 031460 002463 000000 000440
00060: 006300 135164 034001 025556 000000 031460 000000 000040
00070: 017140 033561 000000 000000 000000 000000 000000 000000
00100: SAME: TO 000200-1

*T RECORD 1231 (%2317, #4CF)
00000: 036000 060156 030704 001764 000000 000501 017140 033562
00010: 000000 000502 000000 017140 033760 000000 000505 017000
00020: 000000 047565 074000 000450 017002 047565 000000 003740
00030: 000447 017002 041565 000036 000000 001440 017035 033760
00040: 000000 000511 000000 017140 033571 000000 000511 017140
00050: 000000 033570 000000 000510 017140 033760 000000 000000
00060: 000512 017140 031460 025613 000000 020040 005000 033760
00070: 000000 000513 000000 017000 000000 000000 000000 000000
00100: SAME: TO 000200-1

*T RECORD 1232 (%2320, #4D0)
00000: 036000 060156 141364 002042 000000 031460 025613 020040
```

284

```
00010: 005000 005314 000000 034001 025574 033760 016000 000444
00020: 000000 017000 033760 000160 000446 017000 000000 041563
00030: 000300 001440 017036 031460 000000 025602 020040 005000
00040: 023760 000000 000000 000500 017000 033760 010000 000444
00050: 000000 017000 041567 000300 001440 017036 000000 031460
00060: 025607 020040 005000 023760 000000 000000 000500 017000
00070: 001560 143023 000000 000440 000000 000000 000000 000000
00100: SAME: TO 000200-1


*T RECORD 1233 (%2321, #4D1)
00000: 036000 060156 166745 002120 000000 017340 033760 000000
00010: 000506 017000 000000 031460 003672 000040 006000 031760
00020: 000000 000076 000440 017300 031163 000000 000000 006447
00030: 017070 000674 034001 025612 000000 031460 025615 000040
00040: 006000 031460 000000 025763 000040 006000 031460 000000
00050: 000000 000040 007000 031760 041401 000440 000000 017700
00060: 031760 100001 014440 017470 000000 111564 004000 000440
00070: 017000 031460 000000 025622 000000 000000 000000 000000
00100: SAME: TO 000200-1


*T RECORD 1234 (%2322, #4D2)
00000: 036000 060156 146253 002176 000000 020040 005000 031563
00010: 000033 000440 000000 017760 111566 000040 000440 017000
00020: 000000 031460 025625 020040 005000 031567 000000 000033
00030: 000440 017760 031760 043001 000000 000440 017700 041260
00040: 000000 000440 000000 017030 111564 016000 000440 017000
00050: 000000 135262 034001 025630 031460 025632 000000 120040
00060: 005000 031463 025635 002440 000000 016034 111566 000160
00070: 000440 017000 000000 031460 000000 000000 000000 000000
00100: SAME: TO 000200-1


*T RECORD 1235 (%2323, #4D3)
00000: 036000 060156 176443 002254 000000 025635 120040 005000
00010: 031467 000000 000000 002440 017034 031564 000000 000500
00020: 000000 017030 031566 000000 000500 017030 000000 033760
00030: 000002 000440 017000 111563 000000 000100 000440 017000
00040: 031460 025644 000000 120040 005000 033760 001000 000445
00050: 000000 017000 031565 000000 000500 017030 000000 111563
00060: 000300 000440 017000 031460 000000 025647 120040 005000
00070: 163623 034001 000000 025646 000000 000000 000000 000000
00100: SAME: TO 000200-1


*T RECORD 1236 (%2324, #4D4)
00000: 036000 060156 100624 002332 000000 043260 000000 000440
00010: 017000 111567 000000 000300 000440 017000 031460 025652
00020: 000000 120040 005000 043260 000000 000440 000000 017000
00030: 031460 000000 014040 017460 000000 031760 043400 000440
00040: 017700 031560 000000 000040 014440 017470 111564 004000
00050: 000000 000440 017000 031460 025673 020040 000000 005000
00060: 001563 000022 000440 017700 000000 033760 000041 000445
00070: 017000 033465 000000 025664 000000 000000 000000 000000
00100: SAME: TO 000200-1


*T RECORD 1237 (%2325, #4D5)
00000: 036000 060156 172073 002410 000000 154440 005000 033760
00010: 000004 000445 000000 017000 033760 000001 000440 017000
00020: 000000 154474 034001 025664 031465 000000 000000 014440
00030: 017470 031460 000000 014440 000000 017570 031563 000004
```

```
00040: 000440 017700 000000 031461 000000 014440 017470 031472
00050: 000000 000000 014440 017570 031462 000000 000000 014440
00060: 017570 031473 000000 014440 000000 017570 111566 000040
00070: 000440 017000 000000 031460 000000 000000 000000 000000
00100: SAME: TO 000200-1


*T RECORD 1238 (%2326, #4D6)
00000: 036000 060156 016312 002466 000000 025711 020040 005000
00010: 001567 000022 000000 000440 017700 033760 000041 000445
00020: 000000 017000 033465 025702 154440 005000 000000 033760
00030: 000004 000445 017000 033760 000000 000001 000440 017000
00040: 131007 034001 000000 025702 031565 002000 014440 017470
00050: 000000 031560 002000 014440 017570 001567 000000 000004
00060: 000440 017700 031471 000000 000000 014440 017470 031472
00070: 000000 014440 000000 017570 000000 000000 000000 000000
00100: SAME: TO 000200-1


*T RECORD 1239 (%2327, #4D7)
00000: 036000 060156 013755 002544 000000 031470 000000 014440
00010: 017570 031473 000000 000000 014440 017570 031760 041401
00020: 000000 000440 017700 041260 000000 014440 000000 017470
00030: 111564 004000 000440 017000 000000 031460 025716 020040
00040: 005000 031563 000000 000032 000440 017760 111566 000040
00050: 000000 000440 017000 031460 025721 020040 000000 005000
00060: 142767 034001 025720 031567 000000 000032 000440 017760
00070: 031760 040000 000000 000440 000000 000000 000000 000000
00100: SAME: TO 000200-1


*T RECORD 1240 (%2330, #4D8)
00000: 036000 060156 032461 002622 000000 017700 031460 000000
00010: 000040 007000 000000 031760 177777 000440 017030 031460
00020: 000000 025726 000040 016000 041260 000000 000000 000440
00030: 017030 001560 000005 000440 000000 017360 031760 000003
00040: 000440 017270 000000 031460 025314 000040 006000 031460
00050: 000000 000000 000040 007000 031460 000000 000000 000000
00060: 015000 031460 000000 000020 000000 015000 031460 000000
00070: 000140 015000 000000 031460 000000 000000 000000 000000
00100: SAME: TO 000200-1


*T RECORD 1241 (%2331, #4D9)
00000: 036000 060156 153633 002700 000000 000000 000120 015000
00010: 157402 034001 000000 025736 031460 000000 000100 015000
00020: 000000 031460 000000 000440 017030 031461 000000 000000
00030: 000500 015030 031462 000000 000000 000500 015030 031463
00040: 000000 000500 000000 015030 031464 000000 000500 015030
00050: 000000 031465 000000 000500 015030 031466 000000 000000
00060: 000500 015030 031467 000000 000000 000500 015030 031470
00070: 000000 000500 000000 015030 000000 000000 000000 000000
00100: SAME: TO 000200-1


*T RECORD 1242 (%2332, #4DA)
00000: 036000 060156 106272 002756 000000 031471 000000 000500
00010: 015030 031472 000000 000000 000500 015030 031473 000000
00020: 000000 000500 015030 031474 000000 000500 015030 000000
00030: 075144 034001 025754 031475 000000 000000 000500 015030
00040: 031476 000000 000000 000500 015030 031477 000000 000500
00050: 000000 015030 031260 000000 000500 015030 000000 031460
00060: 000000 000100 015000 031460 000000 000000 000040 010000
```

```
00070: 031460 007751 000000 000040 000000 000000 000000 000000
00100: SAME: TO 000200-1


*T RECORD 1243 (%2333, #4DB)
00000: 036000 060156 050135 003034 000000 007000 031460 000000
00010: 000040 011000 000000 031460 007752 000000 014000 031460
00020: 000000 000000 000040 011000 030760 000000 000000 000400
00030: 011000 033760 000000 000417 000000 011000 033760 000000
00040: 000416 011000 000000 033760 000000 000415 011000 051523
00050: 000000 034001 025772 033760 000000 000414 000000 011000
00060: 033760 000000 000413 011000 000000 033760 000000 000412
00070: 011000 033760 000000 000000 000000 000000 000000 000000
00100: SAME: TO 000200-1


*T RECORD 1244 (%2334, #4DC)
00000: 036000 060156 012326 003112 000000 000411 011000 033760
00010: 000000 000410 000000 011000 033760 000000 000407 011000
00020: 000000 033760 000000 000406 011000 033760 000000 000000
00030: 000405 011000 033760 000000 000000 000404 011000 033760
00040: 000000 000403 000000 011000 033760 000000 000402 011000
00050: 000000 033760 000000 000401 011000 033760 000000 000000
00060: 000400 011000 031760 000000 000000 000400 011030 040600
00070: 010001 026010 000000 031760 000000 000000 000000 000000
00100: SAME: TO 000200-1


*T RECORD 1245 (%2335, #4DD)
00000: 017400 060126 026474 003170 000000 000000 000400 011300
00010: 031760 000000 000000 000400 011700 031760 000000 003400
00020: 000000 011010 031460 000000 000040 007000 000000 045260
00030: 001400 143023 000120 000100 000000 000140 143403 000000
00040: SAME: TO 000200-1


*T RECORD 1246 (%2336, #4DE)
00000: 002000 120000 120000 000000 000000 000000 000000 000000
00010: SAME: TO 000200-1


*T RECORD 1247 (%2337, #4DF)
00000: 025000 020000 165771 077115 042516 052440 001614 000000
00010: SAME: TO 000020-1
00020: 000000 020115 042516 052440 050103 045507 027040 044517
00030: 047111 020074 034460 030067 030064 027060 033060 032076
00040: 020040 020040 020040 020040 020040 020040 020040 020040
00050: 020040 020040 000000 000000 000000 000000 000000 000000
00060: SAME: TO 000200-1


*T RECORD 1248 (%2340, #4E0)
00000: 003400 040001 054234 077115 042516 052400 000000 000000
00010: SAME: TO 000200-1


*T RECORD 1249 (%2341, #4E1)
00000: 036000 060156 107713 000000 000000 001613 034001 026014
00010: 031760 143026 000000 000440 017340 031760 000000 000500
00020: 000000 017000 031460 026043 020040 005000 000000 033760
00030: 000000 000500 017000 041260 000000 000000 000440 017070
00040: 031760 143027 000000 000440 017340 031460 000000 000040
00050: 000000 017160 031460 000000 000440 017270 000000 013460
00060: 000000 000440 017000 001560 000000 143033 000440 017340
00070: 033760 000000 000000 000512 000000 000000 000000 000000
```

EP 0 455 351 A2

00100: SAME: TO 000200-1

*T RECORD 1250 (%2342, #4E2)
00000: 036000 060156 164356 000056 000000 017000 001572 000007
00010: 000440 017030 000000 031760 143031 000440 017360 033760
00020: 000000 144052 000440 017000 066735 034001 000000 026032
00030: 031460 002745 000040 006000 000000 001572 000003 000440
00040: 017340 031760 000000 144064 000440 017360 033760 000000
00050: 000000 000500 017000 121560 000600 000440 000000 017170
00060: 033760 144061 000440 017000 000000 031460 002745 000040
00070: 006000 033472 000000 000000 000000 000000 000000 000000
00100: SAME: TO 000200-1

*T RECORD 1251 (%2343, #4E3)
00000: 036000 060156 053020 000134 000000 000440 017000 031460
00010: 026103 000040 000000 006000 031460 000000 000040 007000
00020: 000000 031760 143031 000440 017340 033760 000000 000000
00030: 000500 017000 003560 000014 000000 000455 017000 031460
00040: 022135 000040 000000 006000 027772 034001 026050 101260
00050: 000000 000000 000440 017000 031460 026102 000000 020040
00060: 005000 031760 143032 000440 000000 017300 031260 000000
00070: 000440 017070 000000 001075 000000 000000 000000 000000
00100: SAME: TO 000200-1

*T RECORD 1252 (%2344, #4E4)
00000: 036000 060156 124172 000212 000000 000000 000440 017340
00010: 033760 000000 000000 000500 017000 031760 143026 000040
00020: 000000 017300 031460 026061 120040 005000 000000 031460
00030: 026102 000040 016060 031760 000000 000001 000040 017070
00040: 031460 026067 000000 014040 005000 013460 000000 000440
00050: 000000 017000 001560 143471 000440 017340 000000 031460
00060: 003616 000040 006000 013271 000000 034001 026066 031460
00070: 026102 000040 000000 016000 000000 000000 000000 000000
00100: SAME: TO 000200-1

*T RECORD 1253 (%2345, #4E5)
00000: 036000 060156 065102 000270 000000 031760 101414 000440
00010: 017340 033760 000000 177400 000443 017000 031563 000000
00020: 000000 000500 017070 031760 000017 000440 000000 017170
00030: 043560 077777 000440 017000 000000 001560 143516 000440
00040: 017340 033760 000000 000000 000503 017000 031460 000000
00050: 000000 000040 017140 033760 001427 000500 000000 006000
00060: 013463 000000 000443 017000 000000 031460 026076 120040
00070: 005000 031460 000000 000000 000000 000000 000000 000000
00100: SAME: TO 000200-1

*T RECORD 1254 (%2346, #4E6)
00000: 036000 060156 071174 000346 000000 000040 007000 031460
00010: 000000 000440 000000 017340 011064 034001 026104 033760
00020: 000000 000000 000512 017000 023760 144070 000000 000441
00030: 017000 033760 000006 000442 000000 017000 031460 003644
00040: 000040 006000 000000 033760 144070 000440 017000 031460
00050: 000000 002620 000040 006000 001560 000002 000000 000440
00060: 017340 033760 000000 000501 000000 017000 001561 000014
00070: 000440 017070 000000 031460 000000 000000 000000 000000
00100: SAME: TO 000200-1

*T RECORD 1255 (%2347, #4E7)

288

```
00000: 036000 060156 165707 000424 000000 000000 000040 017140
00010: 035760 000000 000000 000501 017003 031460 000000 000040
00020: 000000 017100 031460 000000 000040 017140 000000 001561
00030: 000000 000500 017070 122600 000000 020001 026122 013472
00040: 000000 000452 000000 017000 031460 026111 120040 005000
00050: 000000 031460 000000 000040 007000 101760 000000 143027
00060: 000440 017340 031760 143026 000000 000440 017360 031760
00070: 000003 000440 000000 017030 000000 000000 000000 000000
00100: SAME: TO 000200-1

*T RECORD 1256 (%2350, #4E8)
00000: 036000 060156 142376 000502 000000 031460 002514 000040
00010: 006000 031460 000000 000000 000040 007000 005323 000400
00020: 000000 143026 000000 143026 034000 143031 000000 000000
00030: 000000 143044 143071 143130 000000 143171 143232 143274
00040: 143335 143377 000000 143434 000002 100001 000000 000550
00050: 000000 000004 000001 143526 000000 000034 000000 000001
00060: 000000 000000 000000 000550 000000 000600 000002 000000
00070: 000000 000000 000000 000001 000000 000000 000000 000000
00100: SAME: TO 000200-1

*T RECORD 1257 (%2351, #4E9)
00000: 036000 060156 146135 000560 000000 000000 000014 100001
00010: 000000 000360 000000 000004 000001 143532 000000 000034
00020: 000000 000001 000000 000000 000000 000360 000000 000600
00030: 000014 000000 000000 000000 000000 100000 000000 000002
00040: 000003 000004 000000 154141 034000 143121 000017 000020
00050: 000000 000022 000023 100002 000000 000016 000000 000016
00060: 100001 000000 000330 000004 000000 000001 143562 000000
00070: 000034 000001 000000 000000 000000 000000 000000 000000
00100: SAME: TO 000200-1

*T RECORD 1258 (%2352, #4EA)
00000: 036000 060156 105507 000636 000000 000000 000000 000330
00010: 000600 000016 000000 000000 000000 000000 100000 000000
00020: 000000 000005 000006 000007 000010 000011 000000 000012
00030: 000013 000014 000015 100002 000000 000000 000016 000016
00040: 100001 000000 000000 000330 000004 000001 143616 000000
00050: 000000 000034 000001 000000 000000 000000 000000 000330
00060: 000600 000016 156344 034000 000000 143211 000000 000000
00070: 000000 100006 000000 100004 000000 000000 000000 000000
00100: SAME: TO 000200-1

*T RECORD 1259 (%2353, #4EB)
00000: 036000 060156 026732 000714 000000 100000 000000 000002
00010: 000003 000004 000000 000017 000020 000000 000000 100002
00020: 000000 000000 000016 000017 100001 000000 000000 000314
00030: 000004 000001 143652 000000 000000 000034 000001 000000
00040: 000000 000000 000000 000314 000600 000017 000000 000000
00050: 000000 000000 100004 100000 000000 000005 000000 000006
00060: 000007 000010 000011 000012 000000 000013 000014 000015
00070: 100002 000016 000000 000000 000000 000000 000000 000000
00100: SAME: TO 000200-1

*T RECORD 1260 (%2354, #4EC)
00000: 036000 060156 104251 000772 000000 000016 100001 000000
00010: 000330 000004 000000 011436 034000 143301 000001 143710
00020: 000000 000000 000034 000001 000000 000000 000000 000000
```

```
00030: 000330 000600 000016 000000 000000 000000 000000 100006
00040: 000000 100000 000000 000000 000002 000003 000004 000017
00050: 000000 000020 000000 000000 100002 000000 000000 000016
00060: 000016 100001 000000 000330 000000 000004 000001 143744
00070: 000000 000034 000000 000001 000000 000000 000000 000000
00100: SAME: TO 000200-1


*T RECORD 1261 (%2355, #4ED)
00000: 036000 060156 006517 001050 000000 000000 000000 000000
00010: 000330 000600 000000 000016 000000 000000 000000 000025
00020: 000000 000000 000005 000006 000007 000010 000000 000011
00030: 000012 000013 056353 034000 000000 143371 000014 000015
00040: 000000 000025 000000 000025 000000 000011 100001 000000
00050: 000000 000424 000004 000001 144002 000000 000000 000034
00060: 000001 000000 000000 000000 000000 000424 000600 000011
00070: 000000 000000 000000 000000 000000 000000 000000 000000
00100: SAME: TO 000200-1


*T RECORD 1262 (%2356, #4EE)
00000: 036000 060156 171252 001126 000000 000024 000000 000024
00010: 000024 000024 000000 000024 000024 000024 000024 000000
00020: 000000 000011 100001 000000 000424 000004 000000 000001
00030: 144026 000000 000034 000001 000000 000000 000000 000000
00040: 000424 000600 000000 000011 000000 000000 000000 000024
00050: 000000 000024 057726 034000 143461 000024 000000 000024
00060: 000024 000024 000024 000024 000000 000024 000000 026125
00070: 036377 036425 000000 036457 000000 000000 000000 000000
00100: SAME: TO 000200-1


*T RECORD 1263 (%2357, #4EF)
00000: 036000 060156 130651 001204 000000 035246 035262 035276
00010: 035312 035326 000000 035342 035356 035372 035406 003650
00020: 000000 036474 036515 000000 036556 036603 000000 036316
00030: 036326 000001 130043 000001 000000 130056 000001 130203
00040: 000001 130206 000000 046505 047125 020040 020040 052520
00050: 000000 042124 020040 020040 051520 051131 000000 041517
00060: 050131 041505 052103 042524 000000 041510 043105 052103
00070: 041114 160406 000000 034000 000000 000000 000000 000000
00100: SAME: TO 000200-1


*T RECORD 1264 (%2360, #4F0)
00000: 036000 060156 014145 001262 000000 143551 052522 051510
00010: 051120 051105 000000 041514 020040 020040 050122 042526
00020: 000000 052520 042124 020040 020040 044137 000000 046124
00030: 051510 040504 046511 042124 000000 030537 050124 042122
00040: 047520 043501 000000 046501 046511 047040 046501 054040
00050: 000000 042524 041510 051105 041514 020040 000000 020040
00060: 050122 042526 051501 053105 000000 040125 050104 052520
00070: 042124 020040 000000 020040 000000 000000 000000 000000
00100: SAME: TO 000200-1


*T RECORD 1265 (%2361, #4F1)
00000: 036000 060156 060625 001340 000000 051520 051131 041517
00010: 050131 041505 000000 052103 042524 041510 043105 052103
00020: 000000 020040 144542 034000 143641 020040 000000 020040
00030: 020040 051105 041514 020040 000000 020040 050122 042526
00040: 040125 050104 000000 052520 042124 020040 020040 044137
00050: 000000 046124 051510 040504 046511 042124 000000 030537
```

EP 0 455 351 A2

```
00060: 050124 042122 047520 043501 000000 046501 046511 047040
00070: 046501 054040 000000 042524 000000 000000 000000 000000
00100: SAME: TO 000200-1

*T RECORD 1266 (%2362, #4F2)
00000: 036000 060156 140264 001416 000000 041510 051105 041514
00010: 050122 042526 000000 020040 020040 051501 053105 020040
00020: 000000 020040 052520 042124 020040 020040 000000 051520
00030: 051131 041517 050131 041505 000000 052103 042524 041510
00040: 043105 175355 000000 034000 143731 052103 020040 020040
00050: 000000 020040 020040 051105 041514 020040 000000 020040
00060: 050122 042526 052105 051115 000000 020040 020040 044137
00070: 046124 051510 000000 040504 000000 000000 000000 000000
00100: SAME: TO 000200-1

*T RECORD 1267 (%2363, #4F3)
00000: 036000 060156 141260 001474 000000 046511 042124 030537
00010: 050124 042122 000000 047520 043501 046501 046511 047040
00020: 000000 046501 054040 042524 041510 020040 000000 020040
00030: 051105 046123 050122 042526 000000 020040 020040 051501
00040: 053105 020040 000000 020040 052520 042124 052105 051115
00050: 000000 045531 041104 046504 043131 051105 000000 046123
00060: 051105 006723 023400 144021 000000 041514 050122 042526
00070: 020040 020040 000000 051501 000000 000000 000000 000000
00100: SAME: TO 000200-1

*T RECORD 1268 (%2364, #4F4)
00000: 026400 060142 042226 001552 000000 053105 040125 050104
00010: 052520 042124 000000 052105 051115 045531 041104 046504
00020: 000000 043131 051105 046123 051105 041514 000000 050122
00030: 042526 020040 020040 100014 000000 000000 000034 000044
00040: 000535 000000 000000 000000 100000 000000 000034 000000
00050: 000000 000000 000377 000377 105250 000000 000000 000000
00060: SAME: TO 000200-1

*T RECORD 1269 (%2365, #4F5)
00000: 002000 120000 120000 000000 000000 000000 000000 000000
00010: SAME: TO 000200-1

*T RECORD 1270 (%2366, #4F6)
00000: 025000 020000 151154 077106 051101 046440 002007 000000
00010: SAME: TO 000020-1
00020: 000000 020105 042111 052056 035123 044120 027106 051101
00030: 046505 026101 042112 051524 027103 047514 047522 036070
00040: 033461 031062 030456 030461 030071 037040 020040 020040
00050: 020040 020040 000000 000000 000000 000000 000000 000000
00060: SAME: TO 000200-1

*T RECORD 1271 (%2367, #4F7)
00000: 003400 040001 056610 077106 051101 046400 000000 000000
00010: SAME: TO 000200-1

*T RECORD 1272 (%2370, #4F8)
00000: 036000 060156 045115 000000 000000 002006 034001 026132
00010: 030760 025000 000000 000440 017000 031460 026145 000040
00020: 000000 006000 030760 025400 000440 017000 000000 031460
00030: 026145 000040 006000 030760 000000 026000 000440 017000
00040: 031460 026145 000000 000040 006000 030760 026400 000440
```

291

```
00050: 000000 017000 031460 026145 000040 006000 000000 031760
00060: 000145 000440 017340 033760 000000 000125 000440 017000
00070: 031560 000000 000000 000500 000000 000000 000000 000000
00100: SAME: TO 000200-1
```

*T RECORD 1273 (%2371, #4F9)
```
00000: 036000 060156 023256 000056 000000 007070 103460 000000
00010: 000440 017340 000000 011260 000000 000440 017300 030760
00020: 000000 000400 000440 017000 163740 034001 000000 026150
00030: 010260 000000 000440 017160 000000 026150 000000 020040
00040: 003000 031760 000000 000002 000440 017030 031460 026155
00050: 000000 000040 016000 101760 000000 000440 000000 017030
00060: 031760 144212 000440 017360 000000 103460 000000 000440
00070: 017340 103460 000000 000000 000000 000000 000000 000000
00100: SAME: TO 000200-1
```

*T RECORD 1274 (%2372, #4FA)
```
00000: 036000 060156 026022 000134 000000 000440 017000 031760
00010: 000000 000500 000000 017000 026163 026165 120040 002000
00020: 000000 031460 026164 000040 016000 031460 000000 026414
00030: 000040 006000 031460 000000 000000 000040 007000 031760
00040: 144743 000440 000000 017300 021244 034001 026166 031760
00050: 000000 000047 000440 017070 031460 000000 000000 000440
00060: 017340 033760 000000 000501 000000 017140 033760 000000
00070: 000502 017140 000000 033760 000000 000000 000000 000000
00100: SAME: TO 000200-1
```

*T RECORD 1275 (%2373, #4FB)
```
00000: 036000 060156 107173 000212 000000 000000 000503 017140
00010: 033760 000000 000000 000500 017000 031760 144247 000440
00020: 000000 017360 031463 000000 000440 017270 000000 031462
00030: 000000 000440 017270 031461 000000 000000 000440 017270
00040: 031760 144205 000000 000440 017300 041560 000377 000440
00050: 000000 017070 041563 000377 000440 017270 000000 041562
00060: 000377 000440 017270 107557 000000 034001 026204 041561
00070: 000377 000440 000000 017270 000000 000000 000000 000000
00100: SAME: TO 000200-1
```

*T RECORD 1276 (%2374, #4FC)
```
00000: 036000 060156 013770 000270 000000 031760 144212 000440
00010: 017340 021760 000000 000000 000500 017000 031460 026212
00020: 000000 040040 005000 031460 026437 000040 000000 006000
00030: 031460 026226 000040 016000 000000 033760 144202 000440
00040: 017000 031460 000000 003540 000040 006000 031760 000145
00050: 000000 000440 017340 033760 010000 000440 000000 017000
00060: 031560 000000 000500 017070 000000 031760 144212 000440
00070: 017340 031760 000000 000000 000000 000000 000000 000000
00100: SAME: TO 000200-1
```

*T RECORD 1277 (%2375, #4FD)
```
00000: 036000 060156 116272 000346 000000 000500 017000 031460
00010: 026230 120040 000000 005000 070306 034001 026222 031760
00020: 000000 145704 000440 017300 031760 000003 000000 000440
00030: 017070 033760 144132 000440 000000 017000 031460 021210
00040: 000040 006000 000000 033760 100003 000440 017000 031460
00050: 000000 026245 000040 016000 031760 133756 000000 000440
00060: 017300 031760 000076 000440 000000 017070 031760 000100
00070: 000440 017170 000000 041260 000000 000000 000000 000000
```

```
00100: SAME: TO 000200-1

*T RECORD 1278 (%2376, #4FE)
00000: 036000 060156 064517 000424 000000 000000 000440 017170
00010: 031460 000000 000000 000040 017160 031760 000003 000440
00020: 000000 017170 031760 101410 000440 017300 000000 031760
00030: 000002 000440 017070 054174 000000 034001 026240 031760
00040: 000102 000440 000000 017300 031760 000010 000440 017070
00050: 000000 031760 144732 000440 017300 101760 000000 000000
00060: 000440 017070 033760 100011 000000 000440 017000 031760
00070: 144156 000440 000000 017300 000000 000000 000000 000000
00100: SAME: TO 000200-1

*T RECORD 1279 (%2377, #4FF)
00000: 036000 060156 007627 000502 000000 031460 000000 000440
00010: 017070 031760 000000 144165 000440 017360 033760 144156
00020: 000000 000440 017000 031460 002745 000040 000000 006000
00030: 033760 144174 000440 017000 000000 031460 020646 000040
00040: 006000 033760 000000 000003 000441 017000 001561 144140
00050: 000000 000440 017340 017542 034001 026256 000000 031760
00060: 000000 000500 017300 013461 000000 000000 000441 017000
00070: 041260 026255 000000 114440 000000 000000 000000 000000
00100: SAME: TO 000200-1

*T RECORD 1280 (%2400, #500)
00000: 036000 060156 141161 000560 000000 005070 033760 144076
00010: 000440 017000 000000 031460 021057 000040 006000 033760
00020: 000000 000003 000441 017000 001561 144244 000000 000440
00030: 017340 033760 000400 000440 000000 017000 041560 000000
00040: 000500 017000 000000 031760 144212 121440 017340 031760
00050: 000000 000000 000500 017000 026301 026303 000000 120041
00060: 002000 013461 000000 000441 000000 017000 031460 026264
00070: 114040 005000 000000 110000 000000 000000 000000 000000
00100: SAME: TO 000200-1

*T RECORD 1281 (%2401, #501)
00000: 036000 060156 007741 000636 000000 034001 026274 031760
00010: 135023 000440 000000 017300 031760 026332 000440 017070
00020: 000000 031760 000001 000440 017030 031460 000000 002514
00030: 000040 006000 031460 000000 000000 000040 007000 031460
00040: 026322 000040 000000 006000 031460 026272 000040 016000
00050: 000000 033760 144213 000442 017000 043260 000000 026306
00060: 050443 005000 033760 144214 000000 000442 017000 001561
00070: 144215 000440 000000 017340 000000 000000 000000 000000
00100: SAME: TO 000200-1

*T RECORD 1282 (%2402, #502)
00000: 036000 060156 114165 000714 000000 101760 144235 000440
00010: 017360 031460 000000 000000 000040 017100 031463 000000
00020: 000000 000440 017170 103314 034001 026312 000000 031460
00030: 000000 000040 017100 031462 000000 000000 000440 017170
00040: 031461 000000 000000 000440 017030 031460 000000 000100
00050: 000000 015000 033760 144235 000440 017000 000000 031460
00060: 014073 000040 006000 031460 000000 000000 000040 011000
00070: 033760 000000 000000 000401 000000 000000 000000 000000
00100: SAME: TO 000200-1

*T RECORD 1283 (%2403, #503)
```

293

```
00000: 036000 060156 002544 000772 000000 007000 031760 135336
00010: 000440 017340 000000 033760 000000 000500 017000 001561
00020: 000000 144140 000440 017340 031760 000000 000000 000500
00030: 017300 031460 000000 000440 000000 017070 031460 000000
00040: 000040 017140 000000 137155 034001 026330 031460 000000
00050: 000000 000040 017160 031460 000000 000040 000000 007160
00060: 031760 000001 000440 017030 000000 031460 002514 000040
00070: 006000 031760 000000 144212 000000 000000 000000 000000
00100: SAME: TO 000200-1

*T RECORD 1284 (%2404, #504)
00000: 036000 060156 025732 001050 000000 000440 017340 033760
00010: 144132 000440 000000 017000 033760 000000 000517 017000
00020: 000000 026341 022124 020040 002000 031460 000000 026342
00030: 000040 016000 031460 021512 000000 000040 006000 033760
00040: 144177 000440 000000 017000 101260 000000 000440 017000
00050: 000000 026360 020646 120040 002000 033760 000000 000003
00060: 000440 017000 045211 034001 000000 026346 001560 144202
00070: 000440 017340 000000 033760 000000 000000 000000 000000
00100: SAME: TO 000200-1

*T RECORD 1285 (%2405, #505)
00000: 036000 060156 021635 001126 000000 000000 000501 017000
00010: 001560 144244 000000 000440 017340 033760 000400 000442
00020: 000000 017000 041562 000000 000500 017030 000000 013460
00030: 000000 000440 017000 031561 000000 026346 114500 005070
00040: 033760 144202 000000 000440 017000 111577 000002 000440
00050: 000000 017000 026412 003540 120040 002000 000000 031477
00060: 000000 000440 017000 031460 000000 026411 020040 005000
00070: 033760 000003 000000 000441 000000 000000 000000 000000
00100: SAME: TO 000200-1

*T RECORD 1286 (%2406, #506)
00000: 036000 060156 036637 001204 000000 017000 001561 144215
00010: 000440 017340 000000 015637 034001 026364 033760 144221
00020: 000000 000440 017360 033760 000006 000442 000000 017000
00030: 001562 000000 000500 017170 000000 031461 000000 000440
00040: 017030 031460 000000 000000 000100 015000 031460 022135
00050: 000000 000040 006000 031460 000000 000040 000000 011000
00060: 033760 000000 000401 017000 000000 101260 000000 000440
00070: 017000 043260 000000 026401 000000 000000 000000 000000
00100: SAME: TO 000200-1

*T RECORD 1287 (%2407, #507)
00000: 036000 060156 054725 001262 000000 020440 005000 033760
00010: 000400 000440 000000 017000 031760 000002 000440 017030
00020: 000000 031460 002514 000040 006000 001561 000000 144244
00030: 000440 017340 102032 034001 000000 026402 061560 000000
00040: 000500 017070 000000 033760 000400 000440 017000 041560
00050: 000000 000000 000500 017000 031460 000000 000000 121040
00060: 017000 031460 026303 000040 000000 006000 013461 000000
00070: 000441 017000 000000 031460 000000 000000 000000 000000
00100: SAME: TO 000200-1

*T RECORD 1288 (%2410, #508)
00000: 036000 060156 056537 001340 000000 026363 114040 005000
00010: 031460 000000 000000 000040 007000 031460 026437 000040
00020: 000000 006000 031460 026360 000040 016000 000000 031460
```

294

```
00030: 021331 000040 006000 033760 000000 144165 000440 017000
00040: 031460 002745 000000 000040 006000 031760 135023 000440
00050: 000000 017300 000547 034001 026420 041260 000000 000000
00060: 000440 017070 031760 144212 000000 000440 017340 023760
00070: 000000 000517 000000 017000 000000 000000 000000 000000
00100: SAME: TO 000200-1


*T RECORD 1289 (%2411, #509)
00000: 036000 060156 043222 001416 000000 041260 026430 014040
00010: 005070 031460 000000 026427 140040 005000 031760 101410
00020: 000000 000440 017300 031760 100012 000440 000000 017070
00030: 031460 000000 000040 007000 000000 033760 144132 000440
00040: 017000 031460 000000 021362 000040 006000 031760 145704
00050: 000000 000440 017300 041260 003564 000440 000000 006070
00060: 031760 000145 000440 017340 000000 033760 010000 000440
00070: 017000 047363 000000 034001 000000 000000 000000 000000
00100: SAME: TO 000200-1


*T RECORD 1290 (%2412, #50A)
00000: 036000 060156 020031 001474 000000 026436 031560 000000
00010: 000500 007070 000000 033760 000003 000440 017000 001560
00020: 000000 144202 000440 017340 033760 000000 000000 000501
00030: 017000 001560 144250 000440 000000 017340 101760 000000
00040: 000500 017300 000000 031460 000000 000040 017100 031461
00050: 000000 000000 000440 017170 023760 000000 000000 000521
00060: 017000 001560 144260 000440 000000 017340 011461 000000
00070: 000440 017360 000000 013460 000000 000000 000000 000000
00100: SAME: TO 000200-1


*T RECORD 1291 (%2413, #50B)
00000: 036000 060156 157737 001552 000000 000000 000440 017000
00010: 031460 026440 000000 114040 005000 033760 002000 000440
00020: 000000 037150 054567 014001 026454 031760 000000 001001
00030: 000440 017340 031560 000000 000000 000500 017070 031760
00040: 001002 000440 000000 017340 033760 000700 000440 017000
00050: 000000 031560 000000 000500 017070 031460 000000 000000
00060: 000040 027170 034567 034000 000000 144076 000004 000306
00070: 000447 144146 000000 030004 000000 000000 000000 000000
00100: SAME: TO 000200-1


*T RECORD 1292 (%2414, #50C)
00000: 036000 060156 115447 001630 000000 000000 144206 000000
00010: 000000 144150 000000 030004 000000 144207 000000 000000
00020: 000000 144152 030004 000000 144210 000000 000000 000000
00030: 144154 030004 000000 144211 000000 000000 000000 177777
00040: 000001 000202 000000 000447 144144 030004 177777 144103
00050: 000000 144111 144117 144125 040514 046040 000000 020103
00060: 020040 020115 020040 020131 000000 020040 020102 020040
00070: 100003 000306 000000 000231 000000 000000 000000 000000
00100: SAME: TO 000200-1


*T RECORD 1293 (%2415, #50D)
00000: 036000 060156 171456 001706 000000 000423 000024 000377
00010: 000377 100003 000000 076342 006000 144166 000306 000231
00020: 000000 000423 000024 000000 000000 144202 000000 144206
00030: 135412 144206 144202 137413 000000 063441 015000 144212
00040: 000000 025040 000000 020040 000310 000356 000424 000472
00050: 000000 000000 000000 000001 000000 000000 000000 000000
```

295

```
00060: 000506 000521 000001 000000 000000 000000 000000 100001
00070: 000000 000506 000000 000000 000000 000000 000000 000000
00100: SAME: TO 000200-1


*T RECORD 1294 (%2416, #50E)
00000: 015400 060123 070313 001764 000000 000001 000000 177777
00010: 115256 006000 000000 144250 024551 024556 024563 024455
00020: 000000 010040 010041 010042 010043 000420 000000 000421
00030: 000422 000423 131353 000000 000000 000000 000000 000000
00040: SAME: TO 000200-1


*T RECORD 1295 (%2417, #50F)
00000: 002000 120000 120000 000000 000000 000000 000000 000000
00010: SAME: TO 000200-1


*T RECORD 1296 (%2420, #510)
00000: 025000 020000 014400 077115 041504 047040 003305 000000
00010: SAME: TO 000020-1
00020: 000000 020040 046511 041522 047440 042105 047123 044524
00030: 054440 020122 042501 042040 040516 042040 050122 044516
00040: 052040 020074 034067 030067 030465 027060 031065 033076
00050: 020040 020040 000000 000000 000000 000000 000000 000000
00060: SAME: TO 000200-1


*T RECORD 1297 (%2421, #511)
00000: 003400 040001 047622 077115 041504 047000 000000 000000
00010: SAME: TO 000200-1


#T RECORD 1298 (%2422, #512)
00000: 036000 060156 155676 000000 000000 003304 003000 144264
00010: 177776 177777 000000 000001 000002 000000 100013 044277
00020: 000000 000400 144273 000005 144300 002000 000000 144275
00030: 000005 000000 000000 100013 000000 044315 000400 144302
00040: 000003 144305 000000 004400 144304 000003 000000 000000
00050: 000000 144323 000000 000000 144315 000000 000000 000000
00060: 055147 000400 144331 000000 000000 144331 004400 144352
00070: 000000 000000 000000 000000 000000 000000 000000 000000
00100: SAME: TO 000200-1


*T RECORD 1299 (%2423, #513)
00000: 036000 060156 140767 000056 000000 000000 000000 000000
00010: 000000 000000 000000 000000 144352 034001 026462 031760
00020: 000000 144276 000440 017340 031760 000000 000000 000500
00030: 017000 031460 026517 120040 000000 005000 021760 000000
00040: 000440 017030 000000 031760 144276 000440 017360 031460
00050: 000000 000000 000040 017160 031760 134721 000000 000440
00060: 017340 033760 000000 000501 000000 017140 033760 024251
00070: 000500 006000 000000 031760 000000 000000 000000 000000
00100: SAME: TO 000200-1


*T RECORD 1300 (%2424, #514)
00000: 036000 060156 037615 000134 000000 141733 000440 017340
00010: 031760 000000 000000 000500 017000 031460 026512 014040
00020: 000000 005000 031460 026560 000040 006000 000000 031760
00030: 000005 000440 017030 155002 000000 034001 026500 101760
00040: 144272 000440 000000 017360 101760 144274 000440 017360
00050: 000000 031760 000003 000440 017030 101760 000000 144301
00060: 000440 017360 101760 144303 000000 000440 017360 033760
```

```
00070: 144271 000440 000000 017000 000000 000000 000000 000000
00100: SAME: TO 000200-1

*T RECORD 1301 (%2425, #515)
00000: 036000 060156 005015 000212 000000 031460 003050 000040
00010: 006000 033760 000000 144300 000440 017000 031460 003050
00020: 000000 000040 006000 031460 000000 000040 000000 007000
00030: 031760 144276 000440 017300 000000 041260 000000 000440
00040: 017070 031460 000000 000000 000040 011160 031460 000000
00050: 000000 000040 011000 044344 034001 026516 000000 031460
00060: 000000 000040 007000 041260 000000 000000 000440 017070
00070: 031460 027204 000000 000040 000000 000000 000000 000000
00100: SAME: TO 000200-1

*T RECORD 1302 (%2426, #516)
00000: 036000 060156 005252 000270 000000 006160 031460 000000
00010: 000040 011000 000000 031460 035764 000040 016000 031760
00020: 000000 144276 000440 017340 031760 000000 000000 000500
00030: 017000 031460 000000 020040 000000 007000 033760 144332
00040: 000457 017000 000000 033760 144336 000456 017000 033760
00050: 000000 144342 000455 017000 033760 144346 000000 000454
00060: 017000 033760 144331 000453 000000 017000 031460 027031
00070: 000040 006000 000000 166777 000000 000000 000000 000000
00100: SAME: TO 000200-1

*T RECORD 1303 (%2427, #517)
00000: 036000 060156 057566 000346 000000 034001 026534 033760
00010: 144451 000440 000000 017000 031460 014073 000040 006000
00020: 000000 031460 000000 000040 007000 031760 000000 000000
00030: 000420 017700 041260 000000 000000 000540 015030 031760
00040: 144276 000440 000000 017360 031460 026477 000040 006160
00050: 000000 031460 000000 000040 011000 031760 000000 000000
00060: 000400 017000 031460 026552 000000 150040 005000 033760
00070: 074402 000440 000000 017000 000000 000000 000000 000000
00100: SAME: TO 000200-1

*T RECORD 1304 (%2430, #518)
00000: 036000 060156 026073 000424 000000 001560 000007 000440
00010: 017340 033760 000000 000300 000440 017000 061560 027204
00020: 000000 000500 016070 170324 034001 026552 000000 031760
00030: 141737 000440 017340 033760 000000 000000 000500 017140
00040: 033760 026675 000000 000501 006000 031760 144276 000440
00050: 000000 017300 021760 000000 000440 017070 000000 031460
00060: 026477 000040 016160 033760 000000 000004 000451 017030
00070: 031460 000000 000000 000100 000000 000000 000000 000000
00100: SAME: TO 000200-1

*T RECORD 1305 (%2431, #519)
00000: 036000 060156 166217 000502 000000 015000 033760 000004
00010: 000452 017030 000000 031460 000000 000100 015000 031760
00020: 000000 144450 000440 017340 031760 000000 000000 000500
00030: 017000 031460 026574 020040 000000 005000 033760 144335
00040: 000457 017000 000000 050347 034001 026570 033760 144331
00050: 000000 000456 017000 031460 026707 000040 000000 006000
00060: 031460 026654 000040 006000 000000 031460 026577 000040
00070: 016000 101760 000000 000000 000000 000000 000000 000000
00100: SAME: TO 000200-1
```

```
*T RECORD 1306 (%2432, #51A)
00000: 036000 060156 175242 000560 000000 000440 017070 031460
00010: 027224 000040 000000 006000 031460 026651 000040 006000
00020: 000000 031460 000000 000040 011000 033760 000000 000000
00030: 000412 011000 033760 000000 000000 000411 017000 033760
00040: 000007 000442 000000 017000 001562 144342 000440 017340
00050: 000000 033760 000000 000500 017000 001562 000000 144352
00060: 000440 017340 110262 034001 000000 026606 001560 000000
00070: 000500 017070 000000 013462 000000 000000 000000 000000
00100: SAME: TO 000200-1

*T RECORD 1307 (%2433, #51B)
00000: 036000 060156 004141 000636 000000 000000 000442 017000
00010: 031460 026603 000000 114040 005000 013471 000000 000451
00020: 000000 017030 031460 026616 114040 005000 000000 013472
00030: 000000 000452 017000 031460 000000 026633 014040 005000
00040: 033760 000004 000000 000451 017030 031472 000000 000500
00050: 000000 015030 031460 000000 000100 015000 000000 031760
00060: 134721 000440 017340 033760 000000 000000 000501 017140
00070: 033760 000000 000000 000500 000000 000000 000000 000000
00100: SAME: TO 000200-1

*T RECORD 1308 (%2434, #51C)
00000: 036000 060156 026336 000714 000000 017140 033760 000000
00010: 000503 017140 000000 101750 034001 026624 033760 000000
00020: 000000 000502 017000 001571 144264 000440 000000 017340
00030: 003561 000000 000501 017000 000000 003563 000000 000503
00040: 017000 001572 000000 144264 000440 017340 003560 000000
00050: 000000 000500 017000 003562 026564 000502 000000 016000
00060: 033760 000007 000443 017000 000000 001563 144352 000440
00070: 017340 030760 000000 000000 000000 000000 000000 000000
00100: SAME: TO 000200-1

*T RECORD 1309 (%2435, #51D)
00000: 036000 060156 150354 000772 000000 000500 017000 033760
00010: 000031 000441 000000 017030 043260 003325 000440 006000
00020: 000000 035760 000000 000502 017002 121160 000000 000000
00030: 000442 017000 103265 034001 000000 026642 001441 000000
00040: 114440 017030 000000 001563 144342 000440 017360 013463
00050: 000000 000000 000443 017000 031460 026634 000000 114040
00060: 005000 033760 144411 000440 000000 017000 031460 020646
00070: 000040 006000 000000 031460 000000 000000 000000 000000
00100: SAME: TO 000200-1

*T RECORD 1310 (%2436, #51E)
00000: 036000 060156 147420 001050 000000 000000 000040 007000
00010: 033760 144335 000000 000457 017000 033760 144331 000456
00020: 000000 017000 031460 026706 000040 006000 000000 033760
00030: 144332 000457 017000 033760 000000 144336 000456 017000
00040: 033760 144342 000000 000455 017000 033760 144346 000454
00050: 000000 017000 176400 034001 026660 033760 000000 144331
00060: 000453 017000 031460 027026 000000 000040 006000 031460
00070: 000000 000040 000000 007000 000000 000000 000000 000000
00100: SAME: TO 000200-1

*T RECORD 1311 (%2437, #51F)
00000: 036000 060156 172445 001126 000000 033760 144366 000457
00010: 017000 033760 000000 144362 000456 017000 031460 026707
```

298

```
00020: 000000 000040 006000 033760 144363 000457 000000 017000
00030: 033760 144367 000456 017000 000000 033760 144373 000455
00040: 017000 033760 000000 144377 000454 017000 033760 144362
00050: 000000 000453 017000 031460 027026 000040 000000 006000
00060: 031460 000000 000040 007000 000000 111560 000002 000440
00070: 017030 125535 000000 034001 000000 000000 000000 000000
00100: SAME: TO 000200-1

*T RECORD 1312 (%2440, #520)
00000: 036000 060156 066147 001204 000000 026676 031760 144272
00010: 000440 017360 000000 111561 000002 000440 017030 031760
00020: 000000 144274 000440 017360 111560 000001 000000 000440
00030: 017030 031760 144301 000440 000000 017360 111561 000001
00040: 000440 017030 000000 031760 144303 000440 017360 031460
00050: 000000 000000 000040 007000 031460 026675 000000 000040
00060: 006000 031460 000000 000440 000000 017030 031760 144311
00070: 000440 017360 000000 031461 000000 000000 000000 000000
00100: SAME: TO 000200-1

*T RECORD 1313 (%2441, #521)
00000: 036000 060156 065210 001262 000000 000000 000440 017030
00010: 031760 144310 000000 000440 017360 031462 000000 000440
00020: 000000 017030 113737 034001 026714 031760 000000 144314
00030: 000440 017360 031463 000000 000000 000440 017030 031760
00040: 144313 000440 000000 017360 111560 001000 000440 017000
00050: 000000 031460 026734 114040 005000 031760 000000 144742
00060: 000440 017340 033760 000002 000000 000440 017000 121560
00070: 000000 000500 000000 017000 000000 000000 000000 000000
00100: SAME: TO 000200-1

*T RECORD 1314 (%2442, #522)
00000: 036000 060156 023613 001340 000000 033760 001000 000040
00010: 017000 031460 000000 026727 120040 005000 037460 000000
00020: 000000 000440 017002 121161 000000 000440 000000 017000
00030: 031460 026734 114040 005000 000000 033760 144307 000440
00040: 017000 047473 000000 034001 026732 031460 003620 000040
00050: 000000 006000 031460 026737 000040 016000 000000 031760
00060: 144307 000440 017340 021760 000000 000000 000500 017300
00070: 041260 000004 000000 000640 000000 000000 000000 000000
00100: SAME: TO 000200-1

*T RECORD 1315 (%2443, #523)
00000: 036000 060156 061007 001416 000000 017170 033760 144312
00010: 000440 017000 000000 031460 003620 000040 006000 033760
00020: 000000 000003 000443 017000 031760 000101 000000 000440
00030: 017340 033760 000000 000506 000000 017000 041566 000010
00040: 000440 017000 000000 031460 026747 020040 005000 033760
00050: 000000 000011 000443 017000 001563 144315 000000 000440
00060: 017340 047704 034001 026750 000000 031760 000000 002500
00070: 017036 033760 000000 000300 000000 000000 000000 000000
00100: SAME: TO 000200-1

*T RECORD 1316 (%2444, #524)
00000: 036000 060156 175165 001474 000000 000443 017000 043563
00010: 000000 000503 000000 017000 033760 000004 000444 017000
00020: 000000 041566 000020 000440 017000 031460 000000 026757
00030: 020040 005000 033760 000012 000000 000444 017000 001564
00040: 144315 000440 000000 017340 033760 000077 000444 017000
```

```
00050: 000000 041564 000000 000500 017030 003563 000000 000000
00060: 000503 017000 001563 030400 000000 000440 017340 031476
00070: 000000 000440 000000 017360 000000 000000 000000 000000
00100: SAME: TO 000200-1
```

*T RECORD 1317 (%2445, #525)
```
00000: 036000 060156 140053 001552 000000 033760 000017 000444
00010: 017000 125724 000000 034001 026766 031466 000000 000440
00020: 000000 017000 043260 026771 144443 005000 000000 033760
00030: 000006 000443 017000 001563 000000 144315 000440 017340
00040: 043564 000000 000000 000503 017000 031760 000000 001500
00050: 000000 017034 043564 000000 000502 017000 000000 031760
00060: 000000 001500 017034 043564 000000 000000 000501 017000
00070: 031760 000000 000000 001500 000000 000000 000000 000000
00100: SAME: TO 000200-1
```

*T RECORD 1318 (%2446, #526)
```
00000: 036000 060156 160064 001630 000000 017034 043564 000000
00010: 000500 017000 000000 033760 000360 000444 017000 103760
00020: 000000 000000 000447 017000 041566 000002 000000 000440
00030: 017000 003736 034001 027004 000000 031460 027006 020040
00040: 005000 033760 000000 000007 000447 017000 001567 144315
00050: 000000 000440 017340 043564 000000 000505 000000 017000
00060: 033165 000000 000442 017000 000000 031760 000000 001500
00070: 017034 043564 000000 000000 000000 000000 000000 000000
00100: SAME: TO 000200-1
```

*T RECORD 1319 (%2447, #527)
```
00000: 036000 060156 072371 001706 000000 000505 017000 033165
00010: 000000 000441 000000 017000 031760 000000 001500 017034
00020: 000000 043564 000000 000505 017000 033165 000000 000000
00030: 000440 017000 031760 000000 000000 001500 017034 043564
00040: 000000 000505 000000 017000 031165 000000 000443 017030
00050: 000000 164766 034001 027022 031477 000000 000000 000440
00060: 017360 031462 000000 000440 000000 017270 031461 000000
00070: 000440 017270 000000 031460 000000 000000 000000 000000
00100: SAME: TO 000200-1
```

*T RECORD 1320 (%2450, #528)
```
00000: 036000 060156 120201 001764 000000 000000 000440 007270
00010: 033760 144403 000000 000440 017300 031477 000000 000440
00020: 000000 017070 031475 020646 000440 006170 000000 031477
00030: 000000 000440 017340 033760 000000 000000 000500 017140
00040: 033760 000000 000000 000501 017140 033760 000000 000502
00050: 000000 017140 033760 000000 000503 017140 000000 031473
00060: 000000 000440 017340 031760 000000 000000 000500 017000
00070: 114121 034001 000000 027040 000000 000000 000000 000000
00100: SAME: TO 000200-1
```

*T RECORD 1321 (%2451, #529)
```
00000: 036000 060156 116406 002042 000000 031460 027051 120040
00010: 006000 031476 000000 000000 000440 017300 031460 000000
00020: 000000 000440 017070 031461 000000 000440 000000 017170
00030: 031462 000000 000440 017170 000000 031463 000000 000440
00040: 017170 033760 000000 144406 000440 017300 031476 000000
00050: 000000 000440 017070 031474 020646 000440 000000 016170
00060: 031460 000000 000100 015000 000000 031760 145703 000440
00070: 017340 033760 000000 001000 000000 000000 000000 000000
```

```
00100: SAME: TO 000200-1

*T RECORD 1322 (%2452, #52A)
00000: 036000 060156 004763 002120 000000 000444 017000 121564
00010: 000000 000500 000000 011000 031460 027140 020040 005000
00020: 000000 144036 034001 027056 033760 003400 000000 000444
00030: 017000 121564 000000 000500 000000 017000 031460 027140
00040: 020040 005000 000000 031760 144644 000440 017340 031760
00050: 000000 000000 000500 017000 030760 027075 000000 120400
00060: 005000 033760 000377 000444 000000 017000 001560 025000
00070: 000440 017340 000000 043564 000000 000000 000000 000000
00100: SAME: TO 000200-1

*T RECORD 1323 (%2453, #52B)
00000: 036000 060156 037651 002176 000000 000000 000500 017000
00010: 001561 025400 000000 000440 017340 043564 000000 000501
00020: 000000 017000 001562 026000 000440 017340 000000 043564
00030: 000000 000502 017000 001563 000000 026400 000440 017340
00040: 017217 034001 000000 027074 043564 000000 000503 007000
00050: 000000 031466 000000 000440 017030 031460 000000 000000
00060: 000100 015000 031760 144634 000000 000440 017300 041660
00070: 000003 002440 000000 017034 000000 000000 000000 000000
00100: SAME: TO 000200-1

*T RECORD 1324 (%2454, #52C)
00000: 036000 060156 041551 002254 000000 033760 000000 000506
00010: 017000 031460 000000 000000 000440 017030 001160 000000
00020: 000000 000446 017070 031461 000000 000440 000000 017030
00030: 001161 000000 000446 017170 000000 031462 000000 000440
00040: 017030 001162 000000 000000 000446 017170 031463 000000
00050: 000000 000440 017030 001163 000000 000446 000000 011170
00060: 143006 034001 027112 033760 000000 000000 000406 017000
00070: 031460 005336 000000 000040 000000 000000 000000 000000
00100: SAME: TO 000200-1

*T RECORD 1325 (%2455, #52D)
00000: 036000 060156 014465 002332 000000 006000 001660 024570
00010: 000440 017300 000000 031760 000001 000440 017070 031760
00020: 000000 000200 000440 017170 031760 000000 000000 000440
00030: 017170 031760 144640 000440 000000 017170 031760 144634
00040: 000440 017170 000000 031460 000000 000040 037150 031760
00050: 000000 001002 000440 017340 031562 000000 000000 000500
00060: 017070 031460 000000 000040 000000 037170 031760 001002
00070: 000440 017340 000000 041562 000000 000000 000000 000000
00100: SAME: TO 000200-1

*T RECORD 1326 (%2456, #52E)
00000: 036000 060156 175153 002410 000000 000000 000500 017000
00010: 113233 034001 000000 027130 031460 027126 120040 005000
00020: 000000 033760 000377 000444 017000 031760 000000 144640
00030: 000440 017340 043564 000000 000000 000500 017140 043564
00040: 000000 000501 000000 017140 043564 000000 000502 017140
00050: 000000 043564 000000 000503 017000 031460 000000 000000
00060: 000040 007000 033760 000252 000000 000444 017000 121564
00070: 000000 000400 000000 017000 000000 000000 000000 000000
00100: SAME: TO 000200-1

*T RECORD 1327 (%2457, #52F)
```

```
00000: 036000 060156 006142 002466 000000 031460 027161 120040
00010: 005000 033760 000000 000017 000444 017000 041160 000000
00020: 000000 000444 017030 031760 000000 003500 000000 017034
00030: 142365 034001 027146 033760 000000 000000 000500 017000
00040: 041161 000000 000000 000444 017030 031760 000000 003500
00050: 000000 017034 033760 000000 000501 017000 000000 041162
00060: 000000 000444 017030 031760 000000 000000 003500 017034
00070: 033760 000000 000000 000502 000000 000000 000000 000000
00100: SAME: TO 000200-1


*T RECORD 1328 (%2460, #530)
00000: 036000 060156 073713 002544 000000 017000 041163 000000
00010: 000444 017030 000000 031760 000000 003500 017034 033760
00020: 000000 027167 000503 006000 031460 000000 000000 000040
00030: 007000 033760 000360 000444 000000 017000 043164 000000
00040: 000440 017000 000000 043164 000000 000441 017000 036416
00050: 000000 034001 027164 043164 000000 000442 000000 017000
00060: 043164 027167 000443 006000 000000 031460 000000 000040
00070: 007000 111560 000000 000360 000000 000000 000000 000000
00100: SAME: TO 000200-1


*T RECORD 1329 (%2461, #531)
00000: 036000 060156 151133 002622 000000 000440 017000 031460
00010: 027172 120040 000000 005000 033760 000377 000440 017000
00020: 000000 111561 000360 000440 017000 031460 000000 027175
00030: 120040 005000 033760 000377 000000 000441 017000 111562
00040: 000360 000440 000000 017000 031460 027200 120040 005000
00050: 000000 033760 000377 000442 017000 111563 000000 000360
00060: 000440 017000 031460 027203 000000 120040 005000 056330
00070: 034001 027202 000000 033760 000000 000000 000000 000000
00100: SAME: TO 000200-1


*T RECORD 1330 (%2462, #532)
00000: 036000 060156 115624 002700 000000 000377 000443 017000
00010: 031460 000000 000000 000040 007000 033760 144414 000440
00020: 000000 017000 031460 002745 000040 006000 000000 033760
00030: 144423 000440 017000 031760 000000 144274 000440 017340
00040: 033760 000000 000000 000501 017000 031760 144272 000440
00050: 000000 017340 001560 000001 000440 017360 000000 031461
00060: 000000 000440 017130 031460 000000 002745 000040 006160
00070: 033760 144432 000000 000440 000000 000000 000000 000000
00100: SAME: TO 000200-1


*T RECORD 1331 (%2463, #533)
00000: 036000 060156 054100 002756 000000 017000 031460 002745
00010: 000040 006000 000000 031760 144450 000440 017300 016005
00020: 000000 022001 027220 041260 000000 000440 000000 007070
00030: 033760 144441 000440 017000 000000 031460 002745 000040
00040: 006000 031460 000000 000000 000040 007000 041260 000000
00050: 000000 000440 017030 033760 000007 000445 000000 017000
00060: 001565 144352 000440 017360 000000 013465 000000 000445
00070: 017000 027226 000000 000000 000000 000000 000000 000000
00100: SAME: TO 000200-1


*T RECORD 1332 (%2464, #534)
00000: 036000 060156 042613 003034 000000 014040 003000 047721
00010: 034000 144403 000000 144332 144342 135412 144336 144346
00020: 000000 135412 144342 144332 137413 100001 000000 000271
```

302

```
00030: 000257 000012 000044 000000 000000 000000 100013 000000
00040: 000005 000000 000000 000005 000000 000000 100014 000271
00050: 000000 000257 000012 000044 000000 000000 000000 100014
00060: 000271 000257 000012 000044 000000 177777 177777 000000
00070: 100001 000271 000000 000012 000000 000000 000000 000000
00100: SAME: TO 000200-1
```

*T RECORD 1333 (%2465, #535)
```
00000: 036000 060156 100320 003112 000000 000000 000030 144612
00010: 000271 000026 000000 000000 000005 144631 000271 000042
00020: 000000 000000 000005 144626 000343 000026 000000 114216
00030: 034000 144473 000001 030003 000000 144342 000370 000026
00040: 000001 000001 000000 135336 000343 000042 000001 030003
00050: 000000 144346 000370 000042 000001 000001 000000 135336
00060: 000406 000026 000001 030003 000000 144343 000433 000026
00070: 000001 000001 000000 135336 000000 000000 000000 000000
00100: SAME: TO 000200-1
```

*T RECORD 1334 (%2466, #536)
```
00000: 036000 060156 103233 003170 000000 000406 000042 000001
00010: 030003 144347 000000 000433 000042 000001 000001 135336
00020: 000000 000451 000026 000001 030003 144344 000000 000476
00030: 000026 000001 000001 135336 000000 000451 000042 000001
00040: 030003 144350 000000 000476 000042 000001 051057 024400
00050: 000000 144563 000001 135336 000514 000026 000000 000001
00060: 030003 144345 000541 000026 000000 000001 000001 135336
00070: 000514 000042 000000 000001 000000 000000 000000 000000
00100: SAME: TO 000200-1
```

*T RECORD 1335 (%2467, #537)
```
00000: 025000 060137 144302 003246 000000 030003 144351 000541
00010: 000042 000001 000000 000001 135336 177777 020040 020040
00020: 000000 020040 020103 020040 020040 046440 000000 020040
00030: 020131 020040 020040 041040 000000 040506 052105 051040
00040: 041105 043117 000000 051040 102354 000400 144644 000000
00050: 000000 144644 000000 000000 000000 000000 000000 000000
00060: SAME: TO 000200-1
```

*T RECORD 1336 (%2470, #538)
```
00000: 002000 120000 120000 000000 000000 000000 000000 000000
00010: SAME: TO 000200-1
```

*T RECORD 1337 (%2471, #539)
```
00000: 025000 020000 020132 077115 051102 045440 000364 000000
00010: SAME: TO 000020-1
00020: 000000 020115 042515 047522 054440 051105 040504 041101
00030: 041513 020040 036070 032460 031462 033056 030071 031065
00040: 037040 020040 020040 020040 020040 020040 020040 020040
00050: 020040 020040 000000 000000 000000 000000 000000 000000
00060: SAME: TO 000200-1
```

*T RECORD 1338 (%2472, #53A)
```
00000: 003400 040001 055620 077115 051102 045400 000000 000000
00010: SAME: TO 000200-1
```

*T RECORD 1339 (%2473, #53B)
```
00000: 036000 060156 070327 000000 000000 000363 034001 027231
00010: 031460 025732 000000 000040 006000 031460 002463 000440
```

```
00020: 000000 006300 031460 000000 000040 017140 000000 033760
00030: 000000 000504 017140 033760 000000 000000 000505 017140
00040: 033760 000000 000000 000506 017140 033760 000000 000507
00050: 000000 017140 033760 000000 000511 017000 000000 033760
00060: 016000 000452 017000 041563 000000 007400 002440 017034
00070: 033572 027245 000000 120510 000000 000000 000000 000000
00100: SAME: TO 000200-1
```

*T RECORD 1340 (%2474, #53C)
```
00000: 036000 060156 170567 000056 000000 005000 033760 010000
00010: 000450 017000 000000 031760 000337 000440 017340 031760
00020: 000000 000000 000500 017000 170214 034001 000000 027247
00030: 001740 000000 123440 017034 000000 033570 000000 122510
00040: 017000 031471 000000 000000 000440 017000 033462 027266
00050: 000000 015453 005000 043260 000000 000452 000000 017030
00060: 031473 000000 000440 017000 000000 037473 027257 114453
00070: 005000 103472 000000 027254 000000 000000 000000 000000
00100: SAME: TO 000200-1
```

*T RECORD 1341 (%2475, #53D)
```
00000: 036000 060156 002522 000134 000000 000452 016000 111571
00010: 000002 000440 000000 017000 031460 027264 014040 005000
00020: 000000 041563 000100 000440 017000 031460 000000 027264
00030: 020040 005000 033572 000004 000000 000452 017000 031472
00040: 000000 002440 000000 017035 037366 034001 027265 033570
00050: 000000 000000 000510 017000 043571 077777 000000 000451
00060: 017000 033571 000040 000451 000000 017000 031460 003672
00070: 000040 006000 000000 031760 000000 000000 000000 000000
00100: SAME: TO 000200-1
```

*T RECORD 1342 (%2476, #53E)
```
00000: 036000 060156 041263 000212 000000 007733 000440 017760
00010: 033760 010000 000000 000453 017000 031460 027275 154040
00020: 000000 005000 033760 020000 000453 017000 000000 001163
00030: 000000 000453 017030 031760 000000 000076 000440 017360
00040: 031760 000041 000000 000440 017030 031460 027302 150040
00050: 000000 005000 031760 000004 000440 017030 000000 001563
00060: 000022 014440 017760 023020 000000 034001 027303 031760
00070: 000041 014440 000000 017570 000000 000000 000000 000000
00100: SAME: TO 000200-1
```

*T RECORD 1343 (%2477, #53F)
```
00000: 036000 060156 037725 000270 000000 001563 000004 000440
00010: 017700 031164 000000 000000 014441 017470 031465 000000
00020: 000000 014440 017570 031166 000000 014442 000000 017570
00030: 031467 000000 014440 017570 000000 001563 000032 000440
00040: 017760 031760 000000 043000 000440 017700 031470 000000
00050: 000000 014440 017470 031760 043400 000440 000000 017700
00060: 031471 000000 014440 017470 000000 031760 041401 000440
00070: 017700 041260 000000 000000 000000 000000 000000 000000
00100: SAME: TO 000200-1
```

*T RECORD 1344 (%2500, #540)
```
00000: 012400 060116 003310 000346 000000 014440 017470 031460
00010: 025763 000040 000000 006000 016666 002001 027321 031460
00020: 000000 000000 000040 007000 070041 000000 000000 000000
00030: SAME: TO 000200-1
```

```
*T RECORD 1345 (%2501, #541)
00000: 002000 120000 120000 000000 000000 000000 000000 000000
00010: SAME: TO 000200-1

*T RECORD 1346 (%2502, #542)
00000: 025000 020000 143554 077123 053510 051440 000770 000000
00010: SAME: TO 000020-1
00020: 000000 020042 051527 044524 041510 020110 047523 052042
00030: 020055 020074 034065 030063 031066 027060 034462 032476
00040: 020040 020040 020040 020040 020040 020040 020040 020040
00050: 020040 020040 000000 000000 000000 000000 000000 000000
00060: SAME: TO 000200-1

*T RECORD 1347 (%2503, #543)
00000: 003400 040001 064234 077123 053510 051400 000000 000000
00010: SAME: TO 000200-1

*T RECORD 1348 (%2504, #544)
00000: 036000 060156 074112 000000 000000 000767 034001 027322
00010: 031460 027426 000000 000040 006000 041560 100400 000440
00020: 000000 017000 027331 027403 020040 002000 000000 031460
00030: 027426 000040 006000 031460 000000 000000 000440 017000
00040: 027347 027403 000000 120040 002000 033560 000010 000440
00050: 000000 017000 031760 000337 000440 017340 000000 041560
00060: 000010 000440 017000 033760 000000 027336 020501 005000
00070: 073461 000000 000000 000441 000000 000000 000000 000000
00100: SAME: TO 000200-1

*T RECORD 1349 (%2505, #545)
00000: 036000 060156 070161 000056 000000 017000 043561 000001
00010: 000441 017000 000000 033760 144654 000442 017000 031460
00020: 000000 000000 000440 017000 152605 034001 000000 027340
00030: 031460 027342 114040 005000 000000 033760 144664 000442
00040: 017000 031760 000000 144653 000440 017300 031462 000000
00050: 000000 000440 017070 001562 000002 000440 000000 017300
00060: 001561 020061 000440 017070 000000 031460 027400 000040
00070: 016000 031460 000000 027403 000000 000000 000000 000000
00100: SAME: TO 000200-1

*T RECORD 1350 (%2506, #546)
00000: 036000 060156 142347 000134 000000 000040 006000 033760
00010: 120001 000440 000000 017000 031460 001427 000040 006000
00020: 000000 031460 027403 000040 006000 033760 000000 120002
00030: 000440 017000 031460 001427 000000 000040 006000 031460
00040: 000000 000040 000000 037150 064712 034001 027356 031760
00050: 000000 000010 000440 017030 031760 150000 000000 000440
00060: 017760 031760 000000 000440 000000 017030 031760 160000
00070: 000440 017760 000000 031760 000000 000000 000000 000000
00100: SAME: TO 000200-1

*T RECORD 1351 (%2507, #547)
00000: 036000 060156 037441 000212 000000 157777 000440 017300
00010: 031460 000000 000000 000040 017140 031760 160400 014440
00020: 000000 017760 031760 047400 014440 017760 000000 031760
00030: 000000 000520 017000 031460 000000 027363 014040 005000
00040: 031760 163045 000000 000440 017340 031760 000000 000500
00050: 000000 017000 031460 000000 121040 017000 000000 031760
00060: 150000 000440 017700 035655 000000 034001 027374 041260
```

```
00070: 000000 000440 000000 017470 000000 000000 000000 000000
00100: SAME: TO 000200-1

*T RECORD 1352 (%2510, #548)
00000: 036000 060156 030457 000270 000000 001700 144727 000440
00010: 017340 031460 000000 000000 000100 015000 031460 000000
00020: 000000 000040 027170 033760 144646 000440 000000 017000
00030: 031460 027444 000040 006000 000000 031460 000000 000040
00040: 007000 031460 000000 000000 000040 037150 033760 000000
00050: 000000 000463 037070 041563 177767 000440 000000 017030
00060: 031460 000000 000100 037360 000000 031460 000000 000060
00070: 037030 031463 000000 000000 000000 000000 000000 000000
00100: SAME: TO 000200-1

*T RECORD 1353 (%2511, #549)
00000: 036000 060156 015625 000346 000000 000440 017030 031460
00010: 000000 000100 000000 037360 171645 034001 027412 031460
00020: 000000 000000 000040 037170 031760 000337 000000 000440
00030: 017340 073760 000000 000503 000000 017000 041563 000001
00040: 000440 017070 000000 031760 000300 000040 017300 031760
00050: 000000 000060 000040 017030 031460 027423 000000 020040
00060: 005000 031760 000060 000440 000000 017300 031760 000300
00070: 000440 017030 000000 031460 000000 000000 000000 000000
00100: SAME: TO 000200-1

*T RECORD 1354 (%2512, #54A)
00000: 036000 060156 045627 000424 000000 000000 000120 037320
00010: 031460 000000 000000 000100 037330 031460 000000 000040
00020: 000000 007000 033760 120000 000440 017000 000000 031760
00030: 144645 000440 017300 002100 000000 034001 027430 043260
00040: 000000 000441 000000 017070 031460 001427 000040 006000
00050: 000000 031760 144645 000440 017340 031760 000000 000000
00060: 000500 017000 031460 027442 000000 120040 005000 031460
00070: 000010 000240 000000 017000 000000 000000 000000 000000
00100: SAME: TO 000200-1

*T RECORD 1355 (%2513, #54B)
00000: 036000 060156 063546 000502 000000 103461 000000 000441
00010: 017000 031460 000000 027432 120040 005000 033760 100000
00020: 000000 000440 017000 031460 000000 000040 000000 007000
00030: 033760 001400 000440 017000 000000 043560 000000 000500
00040: 007000 031460 000000 000000 000440 017300 031460 000000
00050: 000000 000120 015000 141403 034001 027446 000000 031460
00060: 002620 000040 006000 031460 000000 000000 000040 011000
00070: 031760 000000 000000 000400 000000 000000 000000 000000
00100: SAME: TO 000200-1

*T RECORD 1356 (%2514, #54C)
00000: 036000 060156 055626 000560 000000 017340 033760 000000
00010: 000501 017140 000000 033760 000000 000502 017140 033760
00020: 000000 000000 000503 017140 033760 000000 000000 003504
00030: 017035 123564 000000 000504 000000 017000 031760 144714
00040: 000440 017300 000000 031461 000000 000440 017070 031462
00050: 000000 000000 000440 017170 031464 000000 000000 000440
00060: 017170 031463 000000 000440 000000 017170 031760 000014
00070: 000440 017170 000000 171777 000000 000000 000000 000000
00100: SAME: TO 000200-1
```

306

```
*T RECORD 1357 (%2515, #54D)
00000: 036000 060156 154504 000636 000000 024001 027464 041260
00010: 000000 000440 000000 017170 031460 000000 000040 017160
00020: 000000 031760 145654 000440 017300 031760 000000 000300
00030: 000440 017070 031460 000000 000000 000040 017040 031760
00040: 000000 000500 000000 017000 031460 027470 120040 005000
00050: 000000 033760 144714 000440 017000 031460 000000 002745
00060: 000040 006000 031460 000000 000000 000040 007000 127511
00070: 023400 144645 000000 000000 000000 000000 000000 000000
00100: SAME: TO 000200-1

*T RECORD 1358 (%2516, #54E)
00000: 034400 060154 102233 000714 000000 100030 000300 000564
00010: 000027 000000 000000 144654 044117 051524 020063 020111
00020: 000000 051440 041125 051531 000000 044117 000000 051524
00030: 020063 020104 047505 051440 000000 047117 052040 040516
00040: 051527 042522 000000 020040 044117 051524 020103 044101
00050: 000000 047107 042440 044516 020120 051117 000000 043522
00060: 042523 051440 024346 001000 000000 144727 000700 000207
00070: 146036 000000 000000 000000 000000 000000 000000 000000
00100: SAME: TO 000200-1

*T RECORD 1359 (%2517, #54F)
00000: 002000 120000 120000 000000 000000 000000 000000 000000
00010: SAME: TO 000200-1

*T RECORD 1360 (%2520, #550)
00000: 025000 020000 050252 077123 052122 052040 002432 000000
00010: SAME: TO 000020-1
00020: 000000 020111 046501 043505 051040 044516 044524 044501
00030: 046111 055101 052111 047516 020063 027126 027123 054516
00040: 041440 036070 033461 031062 033456 030464 031061 037040
00050: 020040 020040 000000 000000 000000 000000 000000 000000
00060: SAME: TO 000200-1

*T RECORD 1361 (%2521, #551)
00000: 003400 040001 063246 077123 052122 052000 000000 000000
00010: SAME: TO 000200-1

*T RECORD 1362 (%2522, #552)
00000: 036000 060156 041121 000000 000000 002431 001400 000100
00010: 000001 000013 000000 000077 000213 004001 000700 031460
00020: 000000 027476 001040 036150 027476 027476 000000 005040
00030: 021150 026672 034001 027476 000000 031460 000000 000040
00040: 037150 031460 000000 000000 000040 012000 031460 000000
00050: 000000 000020 015000 031460 050000 004040 000000 017001
00060: 031460 060000 000040 017001 000000 031460 010000 004040
00070: 017001 031760 000000 007725 000000 000000 000000 000000
00100: SAME: TO 000200-1

*T RECORD 1363 (%2523, #553)
00000: 036000 060156 051310 000056 000000 000440 017760 101760
00010: 000000 000440 000000 017030 031760 004000 014440 017760
00020: 000000 031460 000000 014040 017440 021760 000000 000000
00030: 000500 017000 001740 000000 000000 120440 017030 031760
00040: 001007 000040 000000 017360 031460 027536 020040 005000
00050: 000000 144343 034001 027514 031760 144741 000000 000440
00060: 017340 031760 000000 000500 000000 017000 041260 027536
```

```
00070: 020440 005070 000000 023760 000000 000000 000000 000000
00100: SAME: TO 000200-1


*T RECORD 1364 (%2524, #554)
00000: 036000 060156 156666 000134 000000 130503 000440 017000
00010: 023760 125467 000000 000441 017000 031460 027754 000040
00020: 000000 006000 023760 104461 000440 017000 000000 023760
00030: 125405 000441 017000 031460 000000 027754 000040 006000
00040: 023760 104516 000000 000440 017000 023760 125443 000441
00050: 000000 017000 031460 027754 000040 006000 000000 023760
00060: 104534 000440 017000 023760 000000 125462 000441 017000
00070: 136632 034001 000000 027532 000000 000000 000000 000000
00100: SAME: TO 000200-1


*T RECORD 1365 (%2525, #555)
00000: 036000 060156 156467 000212 000000 031460 027754 000040
00010: 006000 023760 000000 145660 000440 017000 023760 125364
00020: 000000 000441 017000 031460 027754 000040 000000 006000
00030: 031460 004432 000040 006000 000000 031460 005535 000040
00040: 006000 033760 000000 000007 000440 017000 031460 020563
00050: 000000 000040 006000 031460 027614 000040 000000 006000
00060: 031760 002000 000440 017030 000000 031760 000016 000440
00070: 017360 031760 000000 000017 000000 000000 000000 000000
00100: SAME: TO 000200-1


*T RECORD 1366 (%2526, #556)
00000: 036000 060156 010714 000270 000000 000440 017360 031760
00010: 000003 000440 000000 017030 031760 001000 000440 017360
00020: 000000 072324 034001 027550 031760 000000 000000 000500
00030: 017000 031460 027550 120040 000000 005040 031460 027661
00040: 000040 006000 000000 031760 100000 000440 017030 031760
00050: 000000 001000 000440 017360 031460 000000 000000 000040
00060: 011000 031760 000000 003400 000000 017010 031460 027565
00070: 150040 005000 000000 033760 000000 000000 000000 000000
00100: SAME: TO 000200-1


*T RECORD 1367 (%2527, #557)
00000: 036000 060156 025735 000346 000000 145117 000440 017340
00010: 101760 000000 000000 000500 017000 027565 002745 120040
00020: 000000 002000 003560 000011 000440 017340 000000 031460
00030: 027561 000040 016000 031760 000000 145704 000440 017300
00040: 063535 034001 000000 027566 041260 000000 000440 017070
00050: 000000 031760 001400 000440 017030 031760 000000 000145
00060: 000440 017360 031460 027740 000000 000040 006000 031760
00070: 000001 000440 000000 017030 000000 000000 000000 000000
00100: SAME: TO 000200-1


*T RECORD 1368 (%2530, #558)
00000: 036000 060156 033752 000424 000000 031760 101364 000440
00010: 017360 031460 000000 030735 001040 006000 031460 000000
00020: 000000 000040 037150 033760 001750 000440 000000 017000
00030: 013460 027577 120440 005000 000000 031760 110000 000440
00040: 017700 031760 000000 000126 004440 017470 033760 001750
00050: 000000 000440 017000 013460 027603 120440 000000 005000
00060: 112475 034001 027604 033760 000000 001750 000440 017000
00070: 013460 027605 000000 120440 000000 000000 000000 000000
00100: SAME: TO 000200-1
```

308

```
*T RECORD 1369 (%2531, #559)
00000: 036000 060156 144653 000502 000000 005000 031760 110000
00010: 000440 017700 000000 031760 000146 004440 017470 033760
00020: 000000 001750 000440 017000 013460 027611 000000 120440
00030: 005000 031460 000000 000040 000000 037170 031460 012452
00040: 000040 016000 000000 031460 027661 000040 006000 031460
00050: 000000 020626 000040 006000 031460 014727 000000 000040
00060: 006000 033760 144744 000442 000000 017000 003562 000002
00070: 000442 017340 000000 103760 000000 000000 000000 000000
00100: SAME: TO 000200-1

*T RECORD 1370 (%2532, #55A)
00000: 036000 060156 122016 000560 000000 000000 000501 017140
00010: 174755 034001 000000 027622 011461 000000 000040 017360
00020: 000000 031460 027620 120040 005000 043260 000000 000000
00030: 000455 017000 101760 100000 000000 000440 017030 031760
00040: 041407 014440 000000 017760 041260 000000 000440 017030
00050: 000000 031760 040400 014440 017760 031460 000000 015666
00060: 000040 006000 031460 027666 000000 000040 006000 031460
00070: 027636 000040 000000 006000 000000 000000 000000 000000
00100: SAME: TO 000200-1

*T RECORD 1371 (%2533, #55B)
00000: 036000 060156 101404 000636 000000 031460 030071 000040
00010: 006000 031460 000000 000000 000040 007000 031460 000000
00020: 000000 000040 037000 031760 000006 000440 000000 017030
00030: 062770 034001 027640 031760 000000 110000 004440 017760
00040: 031760 000337 000000 000440 017340 033760 000013 000440
00050: 000000 017000 031760 000000 000500 017000 000000 031460
00060: 027646 120040 005000 033760 000000 000012 000440 017000
00070: 001560 104516 000000 000440 000000 000000 000000 000000
00100: SAME: TO 000200-1

*T RECORD 1372 (%2534, #55C)
00000: 036000 060156 103237 000714 000000 017340 033760 000000
00010: 000500 017000 000000 033560 100001 000440 017000 031760
00020: 000000 001007 000440 017340 031760 000000 000000 000500
00030: 017000 031460 027655 020040 000000 005000 031760 000006
00040: 000440 017030 000000 031560 000000 000500 017030 033143
00050: 000000 034001 027656 031760 000000 000440 000000 017360
00060: 031460 000000 000100 037360 000000 031460 000000 000040
00070: 027170 031760 000000 000600 000000 000000 000000 000000
00100: SAME: TO 000200-1

*T RECORD 1373 (%2535, #55D)
00000: 036000 060156 165545 000772 000000 000440 017030 031760
00010: 000016 000440 000000 017360 031760 001250 000440 017030
00020: 000000 031760 000017 000440 017360 031460 000000 000000
00030: 000040 007000 031760 014001 000000 014440 017760 031760
00040: 010000 000440 000000 017700 031760 000037 014440 017470
00050: 000000 033760 000577 000440 017000 031760 000000 000000
00060: 000440 017030 113560 000001 000000 014440 017560 136653
00070: 034001 027674 000000 031460 000000 000000 000000 000000
00100: SAME: TO 000200-1

*T RECORD 1374 (%2536, #55E)
00000: 036000 060156 121442 001050 000000 027673 120040 005000
00010: 031760 014002 000000 014440 017760 031760 010000 000440
```

```
00020: 000000 017700 031760 003737 014440 017470 000000 033760
00030: 000007 000440 017000 031760 000000 000037 000440 017030
00040: 113560 000001 000000 014440 017560 031460 027702 120040
00050: 000000 005000 033760 001770 000440 017000 000000 031760
00060: 000000 000440 017030 113560 000000 000001 014440 017560
00070: 031460 027706 000000 120040 000000 000000 000000 000000
00100: SAME: TO 000200-1


*T RECORD 1375 (%2537, #55F)
00000: 036000 060156 113514 001126 000000 005000 031760 004400
00010: 000440 017700 000000 031760 000000 014440 017470 073620
00020: 000000 034001 027712 031760 000001 014440 000000 017570
00030: 031760 000000 014440 017570 000000 031760 000001 014440
00040: 017570 031760 000000 004420 000440 017700 031760 000141
00050: 000000 014440 017470 031760 000101 014440 000000 017570
00060: 031760 004430 000440 017760 000000 030760 141520 000440
00070: 017000 110660 000000 000001 000000 000000 000000 000000
00100: SAME: TO 000200-1


*T RECORD 1376 (%2540, #560)
00000: 036000 060156 167420 001204 000000 000440 017000 031460
00010: 027722 120040 000000 005000 031760 001007 000440 017340
00020: 000000 021760 000000 000500 017000 027730 000000 016770
00030: 020040 002000 031460 000000 000000 000040 007000 024610
00040: 034001 027730 000000 031760 000412 014440 017740 033760
00050: 000000 000000 000500 017000 031760 004012 000000 014440
00060: 017740 111560 000000 000500 000000 017000 031460 000000
00070: 020040 007000 000000 031760 000000 000000 000000 000000
00100: SAME: TO 000200-1


*T RECORD 1377 (%2541, #561)
00000: 036000 060156 047611 001262 000000 000100 000440 017300
00010: 041260 016750 000000 000440 006070 031460 000000 000040
00020: 000000 007000 033760 127470 000440 017300 000000 031460
00030: 002466 000040 006000 031760 000000 127470 000440 017360
00040: 033760 000233 000000 000440 017000 031460 005545 000040
00050: 000000 006000 033760 000305 000440 017000 000000 145107
00060: 034001 027746 031460 005545 000000 000040 006000 033760
00070: 000033 000440 000000 017000 000000 000000 000000 000000
00100: SAME: TO 000200-1


*T RECORD 1378 (%2542, #562)
00000: 036000 060156 051440 001340 000000 031460 005545 000040
00010: 006000 033760 000000 000105 000440 017000 031460 005545
00020: 000000 000040 006000 031460 000000 000040 000000 007000
00030: 103461 000000 000441 017340 000000 101760 000000 000500
00040: 017000 031460 000000 000000 020040 007000 103460 027754
00050: 000000 000440 016360 031760 000102 000440 000000 017340
00060: 033760 000000 000503 017000 000000 031460 000000 020040
00070: 007000 031760 000000 000100 000000 000000 000000 000000
00100: SAME: TO 000200-1


*T RECORD 1379 (%2543, #563)
00000: 036000 060156 032026 001416 000000 000440 017340 160630
00010: 034001 027764 000000 031760 000000 000500 017000 031460
00020: 000000 027770 122040 005000 033760 130000 000000 000444
00030: 017000 031460 030001 000040 000000 016000 043563 000037
00040: 000443 017000 000000 041563 000001 001440 017034 033760
```

310

```
00050: 000000 000000 000504 017000 041563 000002 000000 001440
00060: 017036 033564 000000 000504 000000 017000 041563 000010
00070: 002440 017035 000000 033564 000000 000000 000000 000000
00100: SAME: TO 000200-1


*T RECORD 1380 (%2544, #564)
00000: 036000 060156 150344 001474 000000 000000 000504 017037
00010: 033564 000000 000000 000504 017000 033564 120000 000444
00020: 000000 017000 073464 000000 000444 017000 000000 115014
00030: 034001 030002 031760 000016 000000 000440 017340 021760
00040: 002000 000440 000000 017300 033760 000000 000516 017000
00050: 000000 113760 030053 000502 006000 053163 000000 000000
00060: 000444 017000 113576 002000 000000 000442 017000 031460
00070: 030060 000040 000000 006000 000000 000000 000000 000000
00100: SAME: TO 000200-1


*T RECORD 1381 (%2545, #565)
00000: 036000 060156 104026 001552 000000 031463 000000 002440
00010: 017036 033760 000000 030015 054504 005000 033564 130000
00020: 000000 000444 017000 031460 030023 000040 000000 016000
00030: 041563 000001 001440 017034 000000 033564 000000 000504
00040: 017000 041563 000000 000002 003440 017034 061750 034001
00050: 000000 030020 033564 000000 000504 017000 000000 041563
00060: 000010 002440 017034 033564 000000 000000 000504 017000
00070: 073464 000000 000000 000444 000000 000000 000000 000000
00100: SAME: TO 000200-1


*T RECORD 1382 (%2546, #566)
00000: 036000 060156 112365 001630 000000 017000 021760 004000
00010: 000440 017300 000000 113760 001000 000442 017000 031460
00020: 000000 030053 000040 006000 053163 000000 000000 000444
00030: 017000 113760 001000 000442 000000 017000 031460 030060
00040: 000040 006000 000000 031760 001007 000440 017340 031760
00050: 000000 000000 000500 017000 031760 003770 000000 000040
00060: 017300 113760 001000 000042 000000 017000 124426 034001
00070: 030036 031463 000000 000000 000000 000000 000000 000000
00100: SAME: TO 000200-1


*T RECORD 1383 (%2547, #567)
00000: 036000 060156 164664 001706 000000 002040 017036 033760
00010: 030064 020503 000000 005000 033760 000002 000440 017000
00020: 000000 031760 000400 000440 017030 121560 000000 005021
00030: 000440 017300 003560 000000 000000 000521 017360 121561
00040: 005243 000440 000000 017000 031460 030043 114040 005000
00050: 000000 031760 004500 000440 017340 033760 000000 002000
00060: 000440 017000 031560 000000 000000 000500 017070 031460
00070: 000000 000040 000000 017160 000000 000000 000000 000000
00100: SAME: TO 000200-1


*T RECORD 1384 (%2550, #568)
00000: 036000 060156 064236 001764 000000 031460 000000 000040
00010: 007000 031460 000000 000000 000040 017140 075721 034001
00020: 000000 030054 041564 000000 000500 017030 000000 031563
00030: 000000 000500 017070 003562 000000 000001 000442 017000
00040: 030053 000000 000000 114040 003000 031460 000000 000040
00050: 000000 017140 041564 000000 000500 017070 000000 003562
00060: 000001 000442 017000 030060 000000 000000 114040 003000
00070: 033760 000010 000000 000456 000000 000000 000000 000000
```

```
00100: SAME: TO 000200-1

*T RECORD 1385 (%2551, #569)
00000: 036000 060156 120136 002042 000000 017000 001576 000000
00010: 000520 017340 000000 003176 000000 000442 017000 031563
00020: 000000 000000 000100 017070 030065 000000 000000 114040
00030: 003000 021760 002000 000440 000000 017300 106310 026001
00040: 030072 113760 000000 004000 000442 017000 041260 000000
00050: 000000 000440 017030 003562 000001 000442 000000 017160
00060: 030074 027760 114040 002000 000000 031460 000000 000040
00070: 007000 031760 000000 144742 000000 000000 000000 000000
00100: SAME: TO 000200-1

*T RECORD 1386 (%2552, #56A)
00000: 036000 060156 014470 002120 000000 000440 017340 033760
00010: 000002 000454 000000 017000 121574 000000 000500 017000
00020: 000000 043260 000000 120454 007000 033760 000000 001000
00030: 000454 017000 031460 000000 000000 000040 007000 076711
00040: 001000 000016 000000 000000 000000 000016 005400 144731
00050: 000000 000000 000000 000000 000000 000000 000000 000000
00060: 000000 000000 000001 000000 000000 000000 144732 034000
00070: 144746 144731 000000 000000 000000 000000 000000 000000
00100: SAME: TO 000200-1

*T RECORD 1387 (%2553, #56B)
00000: 036000 060156 105667 002176 000000 144732 000001 144740
00010: 000001 101374 000000 000001 101373 100001 134736 000000
00020: 000000 101363 177777 101416 177777 101417 000000 177777
00030: 144733 177777 144734 000000 000000 144735 000000 141717
00040: 000001 142300 000000 000001 135336 073000 154221 000000
00050: 000000 154264 000000 145703 000000 145704 000000 000000
00060: 130465 000000 130466 000000 000000 101375 000000 101365
00070: 000000 001000 000000 000000 000000 000000 000000 000000
00100: SAME: TO 000200-1

*T RECORD 1388 (%2554, #56C)
00000: 036000 060156 043103 002254 000000 000273 000000 000144
00010: 000006 000141 000000 000001 074402 125105 157530 034000
00020: 000000 145036 074476 000101 101362 100001 000000 000076
00030: 000000 000142 000374 000145 000000 000400 101376 000000
00040: 101410 000013 000000 101402 000000 145701 000000 145702
00050: 000000 000000 001003 000000 145655 000000 000000 144736
00060: 005777 144737 001200 000100 000000 000001 000102 000077
00070: 000101 000013 000000 144742 000000 000000 000000 000000
00100: SAME: TO 000200-1

*T RECORD 1389 (%2555, #56D)
00000: 036000 060156 140245 002332 000000 000000 144743 000000
00010: 164426 000000 000000 135030 000000 130471 000000 145306
00020: 000000 000000 130476 000000 177777 100024 000000 000000
00030: 001000 000000 001000 000000 000000 000000 141544 023400
00040: 145126 000000 000000 000000 100025 000000 001000 000000
00050: 000000 001000 000000 000000 000000 000000 000000 100026
00060: 000000 001000 000000 001000 000000 000000 000000 000000
00070: 000000 100027 000000 000000 000000 000000 000000 000000
00100: SAME: TO 000200-1

*T RECORD 1390 (%2556, #56E)
```

312

```
00000: 015000 060122 142646 002410 000000 001000 000000 001000
00010: 000000 000000 000000 000000 000000 100004 000001 000767
00020: 000000 000340 000003 177777 177777 177777 000000 177777
00030: 177777 154562 000000 000000 000000 000000 000000 000000
00040: SAME: TO 000200-1
```

*T RECORD 1391 (%2557, #56F)
```
00000: 002000 120000 120000 000000 000000 000000 000000 000000
00010: SAME: TO 000200-1
```

*T RECORD 1392 (%2560, #570)
```
00000: 025000 020000 155555 077112 047502 051440 003126 000000
00010: SAME: TO 000020-1
00020: 000000 020040 045505 054520 040504 020042 045117 041123
00030: 021040 020040 020040 020040 036071 030060 031462 034456
00040: 031063 032462 037040 020040 020040 020040 020040 020040
00050: 020040 020040 000000 000000 000000 000000 000000 000000
00060: SAME: TO 000200-1
```

*T RECORD 1393 (%2561, #571)
```
00000: 003400 040001 060215 077112 047502 051400 000000 000000
00010: SAME: TO 000200-1
```

*T RECORD 1394 (%2562, #572)
```
00000: 036000 060156 124673 000000 000000 003125 034001 030105
00010: 031460 002436 000000 000040 006000 031460 000000 020040
00020: 000000 007000 030121 030110 154040 001000 000000 031760
00030: 101373 000440 017340 031760 000000 000000 000500 017000
00040: 031460 000000 000000 014040 007000 031460 001021 000040
00050: 000000 006000 031460 000000 000100 037330 000000 031460
00060: 000000 000100 015000 031460 000000 001427 000040 006000
00070: 031460 000000 000000 000040 000000 000000 000000 000000
00100: SAME: TO 000200-1
```

*T RECORD 1395 (%2563, #573)
```
00000: 036000 060156 071402 000056 000000 011000 031460 000000
00010: 000000 027320 000000 043660 000077 000440 017000 001560
00020: 000000 145174 000440 017340 151762 034001 000000 030123
00030: 010260 000000 000500 015000 000000 031460 000000 000040
00040: 007000 031760 000000 000141 000440 017340 033760 000007
00050: 000000 005440 017000 101760 000000 000500 000000 017030
00060: 041560 000000 000500 017070 000000 031460 030133 000040
00070: 016000 031460 000000 030562 000000 000000 000000 000000
00100: SAME: TO 000200-1
```

*T RECORD 1396 (%2564, #574)
```
00000: 036000 060156 155130 000134 000000 000040 006000 031760
00010: 000145 000440 000000 017340 033760 000400 000440 017000
00020: 000000 031560 000000 000500 007070 103760 000000 000000
00030: 000440 017000 043260 030150 000000 000441 016000 033760
00040: 000002 000440 000000 017000 145500 034001 030141 033760
00050: 000000 000002 000441 017000 031460 030150 000000 000040
00060: 016000 033760 000004 000440 000000 017000 033760 000004
00070: 000441 017000 000000 031460 000000 000000 000000 000000
00100: SAME: TO 000200-1
```

*T RECORD 1397 (%2565, #575)
```
00000: 036000 060156 032304 000212 000000 030150 000040 016000
```

```
00010: 033760 000010 000000 000440 017000 033760 000006 000441
00020: 000000 017000 031760 000144 000440 017340 000000 031760
00030: 000000 000500 017000 031460 000000 030156 045040 005000
00040: 031760 101365 000000 000440 017340 061560 000000 000500
00050: 000000 017070 031460 030132 000040 016000 000000 101461
00060: 000000 000440 017070 137176 000000 034001 030157 031760
00070: 101365 000440 000000 017340 000000 000000 000000 000000
00100: SAME: TO 000200-1
```

*T RECORD 1398 (%2566, #576)
```
00000: 036000 060156 057051 000270 000000 063560 000017 000440
00010: 017000 111560 000000 000000 000500 017000 031760 000017
00020: 000000 000040 017030 031460 030165 020040 000000 005000
00030: 031460 000000 000440 017030 000000 031460 030132 000040
00040: 016060 041260 000000 000000 000440 017030 031760 101401
00050: 000000 000440 017360 031760 000144 000440 000000 017340
00060: 031760 000000 000500 017000 000000 030173 030176 045040
00070: 001000 101760 000000 000000 000000 000000 000000 000000
00100: SAME: TO 000200-1
```

*T RECORD 1399 (%2567, #577)
```
00000: 036000 060156 136767 000346 000000 000440 017070 031760
00010: 000016 000440 000000 017030 073345 034001 030175 031460
00020: 000000 030200 000040 016000 031760 000006 000000 000440
00030: 017070 041260 000000 000440 000000 017030 031760 101365
00040: 000440 017360 000000 031460 030132 000040 016000 031760
00050: 000000 101376 005440 017300 021760 000000 000000 000440
00060: 017070 031460 030562 000040 000000 016000 013462 000000
00070: 000442 017160 000000 121561 000000 000000 000000 000000
00100: SAME: TO 000200-1
```

*T RECORD 1400 (%2570, #578)
```
00000: 036000 060156 011642 000424 000000 030205 120500 005130
00010: 031460 000000 000000 000040 007000 041260 000000 000440
00020: 000000 017030 033760 000005 000442 017000 000000 031760
00030: 145311 000440 017300 030064 000000 034001 030213 043260
00040: 030205 000441 000000 006000 033760 000037 000441 017000
00050: 000000 031460 030232 000040 016000 031760 000000 000023
00060: 000440 017030 033760 000005 000000 000442 017000 031760
00070: 145311 000440 000000 017300 000000 000000 000000 000000
00100: SAME: TO 000200-1
```

*T RECORD 1401 (%2571, #579)
```
00000: 036000 060156 027321 000502 000000 103760 000000 000441
00010: 017000 031460 000000 030205 000040 006000 033760 000037
00020: 000000 000441 017000 031460 030232 000040 000000 016000
00030: 041260 000000 000440 017030 000000 033760 000005 000442
00040: 017000 031760 000000 145311 000440 017300 043260 030205
00050: 000000 000441 006000 117324 034001 030231 000000 033760
00060: 000026 000441 017000 031760 000000 101376 005440 017300
00070: 041260 000000 000000 000440 000000 000000 000000 000000
00100: SAME: TO 000200-1
```

*T RECORD 1402 (%2572, #57A)
```
00000: 036000 060156 122016 000560 000000 017070 033260 000000
00010: 000440 017000 000000 035460 000004 000640 017002 031760
00020: 000000 030606 000440 017030 010460 000000 000000 000420
00030: 015000 123160 017774 000441 000000 006000 031760 145703
```

```
00040: 000440 017340 000000 033760 001000 000443 017000 121563
00050: 000000 000000 000500 017000 031460 030263 000000 120040
00060: 005000 031760 101415 000440 000000 017340 033760 000007
00070: 000440 017000 000000 073507 000000 000000 000000 000000
00100: SAME: TO 000200-1

*T RECORD 1403 (%2573, #57B)
00000: 036000 060156 047313 000636 000000 034001 030247 121560
00010: 000000 000500 000000 017000 031460 030254 020040 005000
00020: 000000 101760 000000 000440 017030 031760 000000 145305
00030: 000440 017360 031460 030263 000000 000040 016000 031760
00040: 145305 000440 000000 017340 021760 000000 000500 017000
00050: 000000 031460 030263 020040 005000 031760 000000 146160
00060: 000440 017340 031760 000000 000000 000500 017000 031460
00070: 030263 020040 000000 005000 000000 000000 000000 000000
00100: SAME: TO 000200-1

*T RECORD 1404 (%2574, #57C)
00000: 036000 060156 165243 000714 000000 030760 000060 000440
00010: 017000 013461 000000 000000 000041 011000 031760 000000
00020: 000000 003400 017010 104110 034001 030265 000000 001561
00030: 145312 000440 017340 000660 000000 030562 000500 016000
00040: 031760 145703 000000 000440 017340 031460 000000 000100
00050: 000000 015000 033760 003400 000440 017000 000000 121560
00060: 000000 000500 017000 031460 000000 030276 120040 005000
00070: 033760 130103 000000 000440 000000 000000 000000 000000
00100: SAME: TO 000200-1

*T RECORD 1405 (%2575, #57D)
00000: 036000 060156 152004 000772 000000 017000 031460 001427
00010: 000040 006000 000000 031460 000000 000040 011000 033760
00020: 000000 001000 000440 017000 121560 000000 000000 000400
00030: 017000 031460 030310 120040 000000 005000 031760 154221
00040: 000440 017340 000000 170146 034001 030303 033760 000000
00050: 000000 000500 017000 031760 154264 000440 000000 017340
00060: 003560 000000 000500 017000 000000 030310 030331 120040
00070: 001000 031460 000000 035455 000000 000000 000000 000000
00100: SAME: TO 000200-1

*T RECORD 1406 (%2576, #57E)
00000: 036000 060156 154322 001050 000000 000040 006000 031760
00010: 000001 000440 000000 017030 031760 144732 000440 017360
00020: 000000 031460 032100 000040 006000 031760 000000 145302
00030: 000440 017340 031760 101411 000000 000440 017360 031760
00040: 145306 000440 000000 017340 031760 000000 000500 017000
00050: 000000 031460 000000 120040 007000 031760 000000 101416
00060: 000440 017340 057007 034001 000000 030321 033760 000077
00070: 000441 017000 000000 043561 000000 000000 000000 000000
00100: SAME: TO 000200-1

*T RECORD 1407 (%2577, #57F)
00000: 036000 060156 070430 001126 000000 000000 000500 017000
00010: 111560 000002 000000 000440 017000 031460 030327 020040
00020: 000000 005000 111560 000051 000440 017000 000000 031460
00030: 030330 120040 005000 030760 000000 000061 000440 017000
00040: 031460 030562 000000 005040 016000 031760 000100 000440
00050: 000000 017340 031760 000000 000500 017000 000000 031460
00060: 030336 120040 005000 031760 000000 101411 000440 017300
```

```
00070: 101760 000000 000000 000440 000000 000000 000000 000000
00100: SAME: TO 000200-1


*T RECORD 1408 (%2600, #580)
00000: 036000 060156 160542 001204 000000 017070 031760 000102
00010: 000440 017340 000000 050120 034001 030337 031760 000000
00020: 000000 000500 017000 031460 030307 120040 000000 005000
00030: 031760 101410 000440 017340 000000 033760 000000 000500
00040: 017000 031460 000000 030345 020040 005000 031560 100000
00050: 000000 000440 017070 031460 016342 000040 000000 006000
00060: 031460 030313 000040 016000 000000 031260 000000 001440
00070: 017036 030760 000000 000077 000000 000000 000000 000000
00100: SAME: TO 000200-1


*T RECORD 1409 (%2601, #581)
00000: 036000 060156 072417 001262 000000 000440 017000 101760
00010: 000000 000500 000000 017030 041660 000000 000500 017030
00020: 000000 031760 101362 005440 017360 031460 000000 000000
00030: 000040 007000 145547 034001 000000 030355 033260 000000
00040: 000441 017000 000000 035461 000004 000641 017002 043561
00050: 000000 000013 000441 017000 111561 000013 000000 000440
00060: 017000 001740 000000 120040 000000 017030 031760 101376
00070: 000040 017360 000000 031760 000000 000000 000000 000000
00100: SAME: TO 000200-1


*T RECORD 1410 (%2602, #582)
00000: 036000 060156 114152 001340 000000 145703 000440 017340
00010: 033760 002000 000000 000441 017000 121561 000000 000500
00020: 000000 017000 031460 030371 120040 005000 000000 041260
00030: 000000 000440 017030 031760 000000 101376 000440 017360
00040: 033260 000000 000000 000441 017000 035461 000004 000641
00050: 000000 017002 144062 034001 030373 031461 000000 000000
00060: 000440 017030 031460 000000 000000 000100 015000 041561
00070: 000017 000440 000000 017030 000000 000000 000000 000000
00100: SAME: TO 000200-1


*T RECORD 1411 (%2603, #583)
00000: 036000 060156 023107 001416 000000 031760 101410 000440
00010: 017360 031460 000000 020065 000040 006000 001560 000046
00020: 000000 000440 017340 033760 000000 000501 000000 017000
00030: 031760 101410 000440 017340 000000 033760 000000 000500
00040: 017000 031760 000000 000101 000440 017340 031460 000000
00050: 000000 000500 015070 031760 030606 000440 000000 017030
00060: 031460 017774 000040 006000 000000 031460 000000 000040
00070: 011000 157453 000000 034001 000000 000000 000000 000000
00100: SAME: TO 000200-1


*T RECORD 1412 (%2604, #584)
00000: 036000 060156 032710 001474 000000 030411 031760 000000
00010: 000400 017030 000000 031760 000101 000440 017360 031460
00020: 000000 000000 000040 011000 033760 030423 000000 000401
00030: 006000 035461 000002 000641 000000 017002 031760 145302
00040: 000440 017300 000000 011461 000000 000440 017070 040660
00050: 000000 000077 000440 017000 000061 000000 000000 005440
00060: 017000 031460 030267 000040 000000 016000 031760 000100
00070: 000440 017340 000000 031760 000000 000000 000000 000000
00100: SAME: TO 000200-1
```

```
*T RECORD 1413 (%2605, #585)
00000: 036000 060156 005032 001552 000000 000000 000500 017000
00010: 031460 000000 000000 020040 007000 031760 145310 000440
00020: 000000 017340 070546 034001 030427 031760 000000 000000
00030: 000500 017000 031460 000000 000000 120040 007000 031760
00040: 000102 000440 000000 017300 041260 000000 000440 007070
00050: 000000 033260 000000 000441 017000 035461 000000 000004
00060: 000641 017002 001561 030440 000000 000440 017030 031460
00070: 000000 000100 000000 015000 000000 000000 000000 000000
00100: SAME: TO 000200-1

*T RECORD 1414 (%2606, #586)
00000: 036000 060156 115706 001630 000000 031460 000000 000040
00010: 007000 031460 000000 030442 000040 016000 043260 030443
00020: 000000 000441 016000 033760 000200 000441 000000 017000
00030: 033760 000007 000440 017000 000000 031460 030454 000040
00040: 016000 161555 000000 034001 030445 033760 000003 000440
00050: 000000 017000 101560 133777 000440 017340 000000 103760
00060: 000000 000501 017000 043561 000000 000007 000441 017000
00070: 001740 000007 000000 120440 000000 000000 000000 000000
00100: SAME: TO 000200-1

*T RECORD 1415 (%2607, #587)
00000: 036000 060156 050453 001706 000000 017030 001560 133777
00010: 000440 017360 000000 031461 030533 000440 016170 031760
00020: 000000 145304 000440 017340 031760 000000 000000 000500
00030: 017000 031460 000000 020040 000000 007000 101560 133777
00040: 000440 017340 000000 103760 000000 000502 017070 031461
00050: 000000 000000 000440 017000 031460 030533 000000 020040
00060: 005000 144474 034001 030463 000000 031760 000142 000440
00070: 017340 031561 000000 000000 000000 000000 000000 000000
00100: SAME: TO 000200-1

*T RECORD 1416 (%2610, #588)
00000: 036000 060156 132316 001764 000000 000500 017070 033760
00010: 000001 000443 000000 017000 031760 145311 000440 017340
00020: 000000 031760 000000 000500 017000 041260 000000 030503
00030: 120440 005070 021760 000000 000000 000440 017030 041562
00040: 000010 000440 000000 017000 031460 030476 120040 005000
00050: 000000 111562 000004 000440 017000 011462 000000 030533
00060: 120440 005030 073461 000000 000000 000441 017060 101560
00070: 133777 000440 000000 017360 000000 000000 000000 000000
00100: SAME: TO 000200-1

*T RECORD 1417 (%2611, #589)
00000: 036000 060156 130116 002042 000000 031760 000142 000440
00010: 017340 056664 000000 034001 030501 041561 000000 000500
00020: 000000 017070 033760 000002 000443 017000 000000 031760
00030: 101415 000440 017340 033760 000000 000000 000500 017000
00040: 033760 074402 000000 000441 017000 111560 000011 000440
00050: 000000 017000 031460 030512 014040 005000 000000 033760
00060: 074476 000441 017000 113560 000000 000010 000440 017000
00070: 031760 101416 000000 000440 000000 000000 000000 000000
00100: SAME: TO 000200-1

*T RECORD 1418 (%2612, #58A)
00000: 036000 060156 020702 002120 000000 017340 003561 000000
00010: 000501 017000 000000 031760 101362 000440 017300 033760
```

317

```
00020: 000000 100001 000442 017000 001562 000000 000000 000500
00030: 017070 074010 034001 030517 000000 031461 000000 000440
00040: 017340 033760 000000 000000 000502 017000 121560 000011
00050: 000000 000440 017037 033760 170000 000440 000000 017000
00060: 043560 000000 000501 017000 000000 033760 007777 000440
00070: 017000 041560 000000 000000 000000 000000 000000 000000
00100: SAME: TO 000200-1


*T RECORD 1419 (%2613, #58B)
00000: 036000 060156 047552 002176 000000 003420 017010 031561
00010: 000000 003420 000000 017010 031760 177774 000440 017034
00020: 000000 043562 000000 000502 017000 031463 000000 000000
00030: 000440 017034 031562 000000 000000 000500 017070 031460
00040: 000000 000040 000000 037150 031760 000145 000440 017340
00050: 000000 114615 034001 030535 033760 000400 000000 000440
00060: 017000 031560 000000 000500 000000 017070 031460 000000
00070: 000040 027170 000000 033760 000000 000000 000000 000000
00100: SAME: TO 000200-1


*T RECORD 1420 (%2614, #58C)
00000: 036000 060156 172601 002254 000000 000006 000440 017000
00010: 033760 000100 000000 000441 017000 031460 030454 000040
00020: 000000 016000 031760 145703 000440 017340 000000 033760
00030: 001000 000441 017000 121561 000000 000000 000500 017000
00040: 031460 030540 000000 120040 005000 033760 000004 000440
00050: 000000 017000 033760 000020 000441 017000 000000 031460
00060: 030454 000040 016000 041660 000000 001700 001440 017036
00070: 047204 034001 000000 030553 000000 000000 000000 000000
00100: SAME: TO 000200-1


*T RECORD 1421 (%2615, #58D)
00000: 036000 060156 022021 002332 000000 031760 000000 000500
00010: 017000 033005 000000 032766 020040 001000 033760 000004
00020: 000000 000440 017000 043260 030454 000441 000000 016000
00030: 031760 145307 000440 017340 000000 031760 101362 000440
00040: 017360 031460 000000 000000 000040 007000 007200 000000
00050: 000000 000441 017000 007161 000000 000441 000000 017002
00060: 030461 000000 000440 017000 000000 031760 101416 000440
00070: 017340 033760 000000 000000 000000 000000 000000 000000
00100: SAME: TO 000200-1


*T RECORD 1422 (%2616, #58E)
00000: 036000 060156 137753 002410 000000 006501 017000 101561
00010: 100000 000440 000000 017030 031760 101362 000440 017360
00020: 000000 012420 034001 030571 003561 074402 000000 000440
00030: 017000 001660 100472 000440 000000 017340 033760 000000
00040: 000502 017140 000000 033760 000000 000503 017140 033760
00050: 000000 000000 000504 017000 031460 000000 000000 000440
00060: 017340 061562 000000 000500 000000 017030 041563 000000
00070: 000500 017030 000000 031564 000000 000000 000000 000000
00100: SAME: TO 000200-1


*T RECORD 1423 (%2617, #58F)
00000: 036000 060156 133572 002466 000000 000000 000500 017070
00010: 031460 000000 000000 054040 007000 000660 000004 002440
00020: 000000 017000 003561 074476 000440 017000 000000 031460
00030: 030572 000040 016000 001560 000000 000046 000440 017300
00040: 005063 034001 000000 030607 031461 000000 000440 007070
```

```
00050: 000000 041660 003700 001440 017036 030760 000000 000000
00060: 000500 017000 113660 000020 000000 000440 017000 031760
00070: 130471 000440 000000 017340 000000 000000 000000 000000
00100: SAME: TO 000200-1


*T RECORD 1424 (%2620, #590)
00000: 036000 060156 057425 002544 000000 111560 000003 000440
00010: 017000 031760 000000 030620 120500 005000 043260 000000
00020: 000000 000041 017000 030622 000000 020040 000000 003000
00030: 121560 000000 000500 017000 000000 033460 000000 020441
00040: 007000 120561 000000 000022 000440 017000 031461 000000
00050: 000000 000440 017030 031460 030562 005040 000000 016060
00060: 032314 034001 030625 033760 000000 000022 000442 017000
00070: 001562 134126 000000 000440 000000 000000 000000 000000
00100: SAME: TO 000200-1


*T RECORD 1425 (%2621, #591)
00000: 036000 060156 130100 002622 000000 017340 033760 000000
00010: 000502 017000 000000 031760 144742 000440 017340 033760
00020: 000000 000003 000440 017000 031760 000000 000000 000500
00030: 017000 021760 000000 020500 000000 007000 063560 000000
00040: 021501 017070 000000 033760 001000 000444 017000 031460
00050: 000000 030640 050040 005000 123464 000000 000000 000444
00060: 017000 031760 101416 000440 000000 017340 033760 000000
00070: 000503 017000 000000 001563 000000 000000 000000 000000
00100: SAME: TO 000200-1


*T RECORD 1426 (%2622, #592)
00000: 036000 060156 020531 002700 000000 074402 000440 017340
00010: 024343 032001 000000 030643 033760 177774 000440 017000
00020: 000000 041560 000000 000500 017030 031561 000000 000000
00030: 000500 017070 031760 101362 000000 000440 017300 001563
00040: 100001 000440 000000 017070 001162 000000 000444 017030
00050: 000000 033760 000022 000443 017000 001563 000000 134126
00060: 000440 017360 001563 134251 000000 000440 017360 001563
00070: 134374 000440 000000 017360 000000 000000 000000 000000
00100: SAME: TO 000200-1


*T RECORD 1427 (%2623, #593)
00000: 036000 060156 060257 002756 000000 031760 144731 000440
00010: 017300 101760 000000 000000 000440 017070 031460 000000
00020: 000000 000040 007000 143606 034000 145175 000000 030125
00030: 030136 030433 030140 030445 000000 030143 030540 030146
00040: 030210 030166 000000 027322 030267 030717 030202 030347
00050: 000000 030355 030371 030225 030371 033105 000000 033150
00060: 033460 033317 033412 033471 000000 035702 035735 030557
00070: 032373 032405 000000 032543 000000 000000 000000 000000
00100: SAME: TO 000200-1


*T RECORD 1428 (%2624, #594)
00000: 036000 060156 164014 003034 000000 030777 030543 030547
00010: 030552 030125 000000 030125 030610 030625 035041 035072
00020: 000000 035075 035147 035204 035235 035253 000000 035624
00030: 036020 035117 030555 035262 000000 035550 032431 032537
00040: 035234 030125 000000 045064 003400 145265 035742 030216
00050: 000000 035510 036033 024443 024521 033057 000000 033453
00060: 002400 145302 000001 000000 000000 000001 000000 000000
00070: 145304 005400 000000 145310 000000 000000 000000 000000
```

```
00100: SAME: TO 000200-1

*T RECORD 1429 (%2625, #595)
00000: 011400 060114 030536 003112 000000 000000 000000 000000
00010: SAME: TO 000020-1
00020: 000000 000000 145310 000000 000000 000000 000000 000000
00030: SAME: TO 000200-1

*T RECORD 1430 (%2626, #596)
00000: 002000 120000 120000 000000 000000 000000 000000 000000
00010: SAME: TO 000200-1

*T RECORD 1431 (%2627, #597)
00000: 025000 020000 041216 077103 051125 052040 000703 000000
00010: SAME: TO 000020-1
00020: 000000 020040 041525 051123 047522 020125 052111 046111
00030: 052111 042523 020040 020040 020040 020040 036070 032460
00040: 031462 033056 030071 031065 037040 020040 020040 020040
00050: 020040 020040 000000 000000 000000 000000 000000 000000
00060: SAME: TO 000200-1

*T RECORD 1432 (%2630, #598)
00000: 003400 040001 062231 077103 051125 052000 000000 000000
00010: SAME: TO 000200-1

*T RECORD 1433 (%2631, #599)
00000: 036000 060156 124660 000000 000000 000702 034001 030660
00010: 003561 006000 000000 000441 017300 033461 000000 000446
00020: 000000 017000 113163 000000 000446 017000 000000 030462
00030: 000000 000440 017000 003163 000000 000000 000446 017360
00040: 010260 000000 000000 000440 017000 031460 030664 120040
00050: 000000 005000 003165 000000 000441 017000 000000 013464
00060: 000000 000444 017000 030661 000000 000000 020040 003000
00070: 031760 000017 000000 000440 000000 000000 000000 000000
00100: SAME: TO 000200-1

*T RECORD 1434 (%2632, #59A)
00000: 036000 060156 111630 000056 000000 017340 033760 000000
00010: 000517 017000 000000 031760 000016 000440 017340 033760
00020: 000000 000000 000516 017000 030332 034001 000000 030676
00030: 031760 002000 000440 017300 000000 103576 000010 000440
00040: 017000 073760 000000 040000 000441 017000 031460 000000
00050: 000000 000040 017040 041561 000000 000500 000000 017070
00060: 013460 000000 000440 017100 000000 031460 030701 140040
00070: 005000 103577 000000 000010 000000 000000 000000 000000
00100: SAME: TO 000200-1

*T RECORD 1435 (%2633, #59B)
00000: 036000 060156 035751 000134 000000 000440 017000 031760
00010: 004000 000440 000000 017300 031460 000000 000040 017040
00020: 000000 041561 000000 000500 017070 013460 000000 000000
00030: 000440 017100 031460 030707 000000 140040 005000 033760
00040: 000003 000440 000000 037150 132461 034001 030714 031760
00050: 000000 001000 000440 017340 031560 000000 000000 000500
00060: 017070 031460 000000 000040 000000 027170 031460 030726
00070: 000040 006000 000000 031760 000000 000000 000000 000000
00100: SAME: TO 000200-1
```

320

```
*T RECORD 1436 (%2634, #59C)
00000: 036000 060156 103010 000212 000000 101364 000440 017340
00010: 021760 000000 000000 000500 017070 031460 030724 114040
00020: 000000 005000 011462 000000 000440 017070 000000 031460
00030: 030735 000040 006000 031460 000000 000000 000040 007000
00040: 031760 135026 000000 000440 017340 031760 000000 000500
00050: 000000 017000 033760 145360 000040 017000 000000 031460
00060: 030733 114040 005000 036552 000000 034001 030732 033760
00070: 145323 000440 000000 017000 000000 000000 000000 000000
00100: SAME: TO 000200-1

*T RECORD 1437 (%2635, #59D)
00000: 036000 060156 125401 000270 000000 031460 000000 000440
00010: 017340 033760 000000 000000 000502 007000 031460 030726
00020: 000000 000040 006000 031760 101364 000440 000000 017340
00030: 101560 000000 000500 017340 000000 033760 000000 000500
00040: 017000 031460 000000 000000 000440 017340 101760 000000
00050: 000000 000500 017000 031460 030754 020040 000000 005000
00060: 033760 000000 000501 017140 000000 033760 000000 000502
00070: 017140 033760 000000 000000 000000 000000 000000 000000
00100: SAME: TO 000200-1

*T RECORD 1438 (%2636, #59E)
00000: 036000 060156 074607 000346 000000 000503 017140 033760
00010: 000000 000504 000000 017140 012317 030001 030750 033760
00020: 000000 000000 000505 017140 031460 030660 000000 000040
00030: 006000 003560 000006 000440 000000 017000 031460 030741
00040: 000040 016000 000000 003560 000001 000440 017140 031760
00050: 000000 101366 000440 017360 101460 000000 000000 000440
00060: 017340 031760 101370 000440 000000 017360 031760 135031
00070: 000440 017300 000000 031760 000000 000000 000000 000000
00100: SAME: TO 000200-1

*T RECORD 1439 (%2637, #59F)
00000: 036000 060156 001204 000424 000000 177112 000440 017070
00010: 031460 020602 000000 000040 006000 031460 000000 000040
00020: 000000 007000 015760 034000 145323 000004 000000 145347
00030: 145347 145347 145347 000000 000000 000040 000001 000040
00040: 000040 000000 000000 000000 000001 000000 000001 000000
00050: 000000 000004 177777 000001 000001 000000 000000 000040
00060: 000001 000040 000040 000000 000000 177777 000013 000013
00070: 000004 145365 000000 145404 000000 000000 000000 000000
00100: SAME: TO 000200-1

*T RECORD 1440 (%2640, #5A0)
00000: 036000 060156 020374 000502 000000 145437 145456 000000
00010: 000040 000001 000000 000040 000040 000007 000000 000001
00020: 000000 000000 000001 000000 000007 177777 000000 000001
00030: 000001 000000 000040 000001 000000 000040 000040 000000
00040: 000005 022163 000000 034000 145413 000001 000000 000013
00050: 000000 000013 000003 000067 000013 000001 000000 000001
00060: 000000 000003 000074 000001 000000 000000 000001 000000
00070: 000000 177777 000000 000013 000000 000000 000000 000000
00100: SAME: TO 000200-1

*T RECORD 1441 (%2641, #5A1)
00000: 036000 060156 024113 000560 000000 000013 000000 000040
00010: 000001 000040 000000 000040 000000 000000 000001 000000
```

```
00020: 000000 000001 000000 000003 177777 000001 000000 000001
00030: 000000 000040 000001 000040 000000 000040 000000 000000
00040: 000004 000001 000000 000002 000322 000001 000013 000004
00050: 000000 000001 000002 000322 000001 000017 000000 000001
00060: 000000 147126 025000 145503 000000 000004 000017 000001
00070: 000035 000001 000000 000000 000000 000000 000000 000000
00100: SAME: TO 000200-1

*T RECORD 1442 (%2642, #5A2)
00000: 030400 060145 032062 000636 000000 000004 000017 000001
00010: 000226 000001 000000 000000 000004 000017 000001 000244
00020: 000000 000001 000000 000004 000017 000001 000000 000004
00030: 000007 000001 000002 000322 000000 000002 000113 000002
00040: 000016 000005 000000 000017 000002 000160 000001 000000
00050: 000000 000001 000000 000003 177777 000017 000000 000017
00060: 147322 000000 000000 000000 000000 000000 000000 000000
00070: SAME: TO 000200-1

*T RECORD 1443 (%2643, #5A3)
00000: 002000 120000 120000 000000 000000 000000 000000 000000
00010: SAME: TO 000200-1

*T RECORD 1444 (%2644, #5A4)
00000: 025000 020000 033032 077111 047124 051040 006653 000000
00010: SAME: TO 000020-1
00020: 000000 020040 044516 052105 051122 052520 052040 051117
00030: 052524 044516 042523 020063 027126 027123 054516 041440
00040: 036070 034460 034061 030056 030464 031464 037040 020040
00050: 020040 020040 000000 000000 000000 000000 000000 000000
00060: SAME: TO 000200-1

*T RECORD 1445 (%2645, #5A5)
00000: 003400 040001 057236 077111 047124 051000 000000 000000
00010: SAME: TO 000200-1

*T RECORD 1446 (%2646, #5A6)
00000: 036000 060156 020707 000000 000000 006652 001400 001000
00010: 000000 000000 000000 000000 001000 005400 001003 000000
00020: SAME: TO 000030-1
00030: 000000 000000 000000 000000 000000 001003 022001 000000
00040: 031460 000000 000000 000040 037040 000002 000000 000040
00050: 000000 024310 031760 110000 004440 017740 000000 033760
00060: 001701 000500 006000 031460 000000 000010 000040 037220
00070: 031460 002065 000000 000040 000000 000000 000000 000000
00100: SAME: TO 000200-1

*T RECORD 1447 (%2647, #5A7)
00000: 036000 060156 061276 000056 000000 006000 031760 000006
00010: 000440 017030 000000 031760 110000 004440 017760 031460
00020: 000000 000023 000040 016000 012471 012001 000000 000020
00030: 031460 000223 000040 026040 000000 031760 135000 014440
00040: 017740 033760 000000 001753 000500 006000 031460 000243
00050: 000000 000040 006000 000025 000000 000040 000000 024310
00060: 034416 032001 000040 031460 000000 000223 000040 026040
00070: 031760 001007 000000 000440 000000 000000 000000 000000
00100: SAME: TO 000200-1

*T RECORD 1448 (%2650, #5A8)
```

322

```
00000: 036000 060156 153212 000134 000000 017340 031760 000000
00010: 000500 017000 000000 031460 000046 020040 005000 031460
00020: 000000 000004 000040 037330 031460 000023 000000 000040
00030: 016000 031760 136400 014440 000000 017740 033760 000000
00040: 000500 017000 000000 031760 137000 014440 017740 033760
00050: 000000 000000 000501 017000 031760 137400 000000 014440
00060: 017740 031460 020112 000040 000000 006000 031460 000023
00070: 000040 016000 000000 003175 000000 000000 000000 000000
00100: SAME: TO 000200-1

*T RECORD 1449 (%2651, #5A9)
00000: 036000 060156 053522 000212 000000 034001 000060 031460
00010: 000223 000040 000000 026040 031760 001007 000440 017340
00020: 000000 031760 000000 000500 017000 031460 000000 000002
00030: 120040 005000 031760 135400 000000 014440 017740 033760
00040: 000017 000441 000000 017000 041561 000071 000500 006030
00050: 000000 031460 000010 000040 037220 031460 000000 000023
00060: 000040 016000 033760 145660 000000 000440 017000 001560
00070: 000000 000500 000000 017340 000000 000000 000000 000000
00100: SAME: TO 000200-1

*T RECORD 1450 (%2652, #5AA)
00000: 036000 060156 156661 000270 000000 033760 000000 000500
00010: 017000 001516 000000 001530 120040 002000 001506 000000
00020: 000000 020040 003000 164665 006001 000100 000000 031460
00030: 000223 000040 026040 033760 000000 020000 000440 017000
00040: 031460 000142 000000 000040 016000 023405 032001 000120
00050: 000000 031460 000223 000040 026040 031760 000000 042400
00060: 014440 017740 033760 000000 000000 000500 017000 031760
00070: 001013 015440 000000 017340 000000 000000 000000 000000
00100: SAME: TO 000200-1

*T RECORD 1451 (%2653, #5AB)
00000: 036000 060156 141570 000346 000000 031760 000000 000500
00010: 017000 031460 000000 000772 120040 005000 031760 000341
00020: 000000 000440 017340 031760 000000 000500 000000 017000
00030: 031460 004132 120040 005000 000000 004132 001050 050040
00040: 001000 033760 000000 160000 000440 017000 031460 001427
00050: 000000 000040 006000 031460 000023 000040 000000 016000
00060: 137417 012001 000140 031460 000000 000223 000040 026040
00070: 033760 010000 000000 000440 000000 000000 000000 000000
00100: SAME: TO 000200-1

*T RECORD 1452 (%2654, #5AC)
00000: 036000 060156 050235 000424 000000 017000 031760 100000
00010: 000440 017030 000000 031760 041400 014440 017760 031460
00020: 000000 000322 000040 016000 115275 006001 000000 000160
00030: 031460 000223 000040 026040 000000 031760 042000 014440
00040: 017740 031460 000000 000122 000040 016000 060405 034001
00050: 000000 000200 031460 000223 000040 026040 000000 033760
00060: 004000 000440 017000 031460 000000 000322 000040 016000
00070: 031760 000103 000000 014440 000000 000000 000000 000000
00100: SAME: TO 000200-1

*T RECORD 1453 (%2655, #5AD)
00000: 036000 060156 141665 000502 000000 017740 031460 000000
00010: 014040 017460 000000 031760 000203 014440 017740 031460
00020: 000000 000000 014040 017460 031760 000403 000000 014440
```

```
00030: 017740 031460 000000 014040 000000 017460 031760 001003
00040: 014440 017740 000000 031460 000000 014040 017460 031760
00050: 000000 002003 014440 017740 031460 000000 000000 014040
00060: 017460 031760 004003 014440 000000 017740 140647 004001
00070: 000216 031460 000000 000000 000000 000000 000000 000000
00100: SAME: TO 000200-1


*T RECORD 1454 (%2656, #5AE)
00000: 036000 060156 151147 000560 000000 014040 017460 031461
00010: 000000 000440 000000 007000 126537 034001 000220 031460
00020: 000000 000223 000040 026040 033760 002000 000000 000440
00030: 017000 031460 000322 000040 000000 016000 031460 000000
00040: 000000 015000 000000 031460 000000 000020 015000 031460
00050: 000000 000000 000140 015000 031460 000000 000000 000120
00060: 015000 031460 000000 000500 000000 015030 031461 000000
00070: 000500 015030 000000 031462 000000 000000 000000 000000
00100: SAME: TO 000200-1


*T RECORD 1455 (%2657, #5AF)
00000: 036000 060156 064017 000636 000000 000000 000500 015030
00010: 031463 000000 000000 000500 015030 031464 000000 000500
00020: 000000 015030 031460 000000 000100 015000 000000 031460
00030: 000000 000040 010000 055267 000000 002001 000236 031460
00040: 007765 000040 000000 007000 050743 034001 000240 031460
00050: 000000 000223 000040 026040 033760 001000 000000 000440
00060: 017000 031460 000322 000040 000000 016000 031460 000000
00070: 000040 011000 000000 031460 000000 000000 000000 000000
00100: SAME: TO 000200-1


*T RECORD 1456 (%2660, #5B0)
00000: 036000 060156 130406 000714 000000 007766 000000 014000
00010: 031460 000000 000000 000040 011000 033760 000000 000404
00020: 000000 011000 033760 000000 000403 011000 000000 033760
00030: 000000 000402 011000 033760 000000 000000 000401 011000
00040: 033760 000000 000000 000400 011000 031760 000000 000400
00050: 000000 011030 031760 000000 000400 011300 000000 031760
00060: 000000 000400 011700 036675 000000 004001 000256 031760
00070: 000000 003400 000000 011010 000000 000000 000000 000000
00100: SAME: TO 000200-1


*T RECORD 1457 (%2661, #5B1)
00000: 036000 060156 070570 000772 000000 031460 000000 000040
00010: 007000 107366 000000 006001 000260 031460 000223 000040
00020: 000000 026040 033760 000400 000440 017000 000000 031460
00030: 000322 000040 016000 004345 000000 006001 000300 031460
00040: 000223 000040 000000 026040 033760 000200 000440 017000
00050: 000000 031460 000322 000040 016000 004165 000000 014001
00060: 000320 031460 000223 000040 000000 026040 033760 000100
00070: 000440 017000 000000 031760 000000 000000 000000 000000
00100: SAME: TO 000200-1


*T RECORD 1458 (%2662, #5B2)
00000: 036000 060156 045130 001050 000000 000076 000440 017340
00010: 041560 000000 000000 000500 017000 073460 000000 000440
00020: 000000 017000 041560 000023 000500 016070 000000 063114
00030: 034001 000340 031460 000223 000000 000040 026040 031760
00040: 001007 000440 000000 017340 031760 000000 000500 017000
00050: 000000 031460 002046 120040 006000 101760 000000 001000
```

324

```
00060: 000440 017340 031760 000000 000000 005500 017000 031460
00070: 000354 120040 000000 005140 000000 000000 000000 000000
00100: SAME: TO 000200-1


*T RECORD 1459 (%2663, #5B3)
00000: 036000 060156 173470 001126 000000 031760 000000 000500
00010: 017000 031460 000000 000354 121040 005000 031760 001000
00020: 000000 000440 017340 033760 001260 000501 000000 006000
00030: 031460 000355 000040 016000 000000 031460 015423 000040
00040: 006000 031460 000000 001400 000040 006000 106551 002001
00050: 000000 000356 031460 000023 000040 016000 000000 050121
00060: 004001 000360 031460 000000 000000 000040 037040 000362
00070: 000000 000040 000000 024310 000000 000000 000000 000000
00100: SAME: TO 000200-1


*T RECORD 1460 (%2664, #5B4)
00000: 036000 060156 130454 001204 000000 116072 034001 000702
00010: 031760 000076 000000 000440 017340 031760 000000 000500
00020: 000000 017000 000702 001021 020040 002000 000000 031460
00030: 000000 000100 037330 021760 000000 000000 000440 017030
00040: 101760 041400 000000 014440 017760 031760 043000 000440
00050: 000000 017700 031760 000337 000440 017340 000000 031760
00060: 000000 000500 017000 043260 000000 000715 020440 005000
00070: 033760 002000 000000 000440 000000 000000 000000 000000
00100: SAME: TO 000200-1


*T RECORD 1461 (%2665, #5B5)
00000: 036000 060156 166642 001262 000000 017000 001560 000040
00010: 014440 017470 000000 031760 043400 000440 017700 031760
00020: 000000 000042 014440 017470 156041 034001 000000 000720
00030: 031760 041400 014440 017760 000000 043260 000000 007440
00040: 017000 043260 000000 000000 000443 017000 031760 047400
00050: 000000 014440 017740 033760 000000 000504 000000 017000
00060: 041564 040000 000440 017000 000000 031460 000723 020040
00070: 005000 031760 000000 040000 000000 000000 000000 000000
00100: SAME: TO 000200-1


*T RECORD 1462 (%2666, #5B6)
00000: 036000 060156 033056 001340 000000 014440 017740 031760
00010: 000000 000500 000000 017000 031460 000734 120040 005000
00020: 000000 031460 000000 000440 017000 031460 000000 000723
00030: 020040 005000 031460 000000 000000 000440 017000 031460
00040: 000750 020040 000000 005000 161225 034001 000736 031460
00050: 000000 000763 014040 005000 003563 000756 000000 044103
00060: 005000 031460 000742 050040 000000 025150 031460 000744
00070: 000040 016160 000000 031760 000000 000000 000000 000000
00100: SAME: TO 000200-1


*T RECORD 1463 (%2667, #5B7)
00000: 036000 060156 011240 001416 000000 160400 014440 017760
00010: 031760 047400 000000 014440 017760 013462 000000 000442
00020: 000000 037170 031460 000723 120040 005000 000000 033760
00030: 100000 000440 017000 031460 000000 000723 000040 016000
00040: 033760 000000 000000 000502 017000 041562 000002 045440
00050: 000000 017000 031460 000766 120040 005000 000000 035462
00060: 000006 000642 017002 056015 000000 034001 000754 103760
00070: 000000 000440 000000 017000 000000 000000 000000 000000
00100: SAME: TO 000200-1
```

```
*T RECORD 1464 (%2670, #5B8)
00000: 036000 060156 150640 001474 000000 031460 000723 000040
00010: 016000 031460 000000 000760 050040 005000 021760 000761
00020: 000000 000500 016300 031760 160000 000440 000000 017760
00030: 033760 000002 000440 017000 000000 031460 000723 000040
00040: 016000 121563 000000 000000 000500 017000 031460 000721
00050: 000000 020040 005000 031460 000000 000040 000000 117000
00060: 101760 041400 000440 017700 000000 021760 000000 014440
00070: 017470 031460 000000 001021 000000 000000 000000 000000
00100: SAME: TO 000200-1

*T RECORD 1465 (%2671, #5B9)
00000: 036000 060156 030634 001552 000000 000040 006000 031460
00010: 000000 000100 000000 027320 102522 034001 000772 031760
00020: 000000 001015 000440 017340 033760 000000 000000 000501
00030: 017000 011461 000776 020440 000000 005000 001005 001002
00040: 020040 001000 000000 111560 100127 000440 017000 031460
00050: 000000 001020 120040 005000 101760 000000 000000 000440
00060: 017070 031460 000132 000040 000000 016000 031760 000002
00070: 000440 017070 000000 031760 000000 000000 000000 000000
00100: SAME: TO 000200-1

*T RECORD 1466 (%2672, #5BA)
00000: 036000 060156 043345 001630 000000 001014 000440 017300
00010: 031460 000132 000000 000440 016070 111560 100000 000440
00020: 000000 017000 031460 001002 120040 005000 000000 041260
00030: 000000 000440 017070 104311 000000 034001 001010 031760
00040: 001013 000440 000000 017300 101760 000000 000440 017070
00050: 000000 033760 160000 000440 017000 031460 000000 001427
00060: 000040 006000 031460 000000 000000 000060 037030 031760
00070: 001033 000440 000000 017030 000000 000000 000000 000000
00100: SAME: TO 000200-1

*T RECORD 1467 (%2673, #5BB)
00000: 036000 060156 006606 001706 000000 031460 000000 000100
00010: 015000 001020 000000 000000 000040 024310 041260 000132
00020: 000000 000440 016070 031460 000000 000440 000000 017030
00030: 031460 000000 000100 015000 000000 033760 000015 000440
00040: 017000 031760 000000 000337 000440 017340 031760 000000
00050: 000000 000500 017000 131433 034001 001026 000000 031460
00060: 001030 020040 005000 033760 000000 000014 000440 017000
00070: 001560 104516 000000 000440 000000 000000 000000 000000
00100: SAME: TO 000200-1

*T RECORD 1468 (%2674, #5BC)
00000: 036000 060156 120574 001764 000000 017340 031460 000000
00010: 000040 011000 000000 033760 000000 000400 007000 043260
00020: 000000 140137 000457 037360 031760 001013 000000 000440
00030: 017340 031760 000000 000500 000000 017000 031460 001035
00040: 014040 005040 000000 031760 177777 000440 017070 031760
00050: 000000 001014 000440 017340 033760 000000 000000 000501
00060: 017000 031760 001034 000440 000000 017030 111561 000002
00070: 000440 017000 000000 040711 000000 000000 000000 000000
00100: SAME: TO 000200-1

*T RECORD 1469 (%2675, #5BD)
00000: 036000 060156 114007 002042 000000 034001 001044 031460
```

```
00010: 001046 120040 000000 005000 031760 000700 000440 017030
00020: 000000 031460 000000 000100 015000 031460 000000 000702
00030: 000040 016000 043560 000177 000000 000441 017000 121561
00040: 000077 021440 000000 017000 004132 004132 014041 001000
00050: 000000 111561 000030 000440 017000 031460 000000 001056
00060: 014040 005000 113561 000046 000000 000441 017000 001561
00070: 145555 000440 000000 017340 000000 000000 000000 000000
00100: SAME: TO 000200-1


*T RECORD 1470 (%2676, #5BE)
00000: 036000 060156 106365 002120 000000 031460 000000 000100
00010: 015000 031460 000000 000000 000040 007000 031760 101373
00020: 000000 000440 017340 060441 034001 001062 000000 033760
00030: 000000 000501 017000 041560 000000 000400 000440 017000
00040: 031460 001067 000000 020040 005000 041561 177776 000440
00050: 000000 017070 031460 000132 000040 016000 000000 031561
00060: 000001 000440 017070 031460 000000 000132 000040 016000
00070: 031760 101373 000000 000440 000000 000000 000000 000000
00100: SAME: TO 000200-1


*T RECORD 1471 (%2677, #5BF)
00000: 036000 060156 137505 002176 000000 017340 033760 000000
00010: 000501 017000 000000 041560 000400 000440 017000 031460
00020: 000000 001077 020040 005000 041561 077777 000000 000440
00030: 017070 031460 001100 000040 000000 016000 031561 100000
00040: 000440 017070 000000 064673 034001 001100 101760 000000
00050: 000000 000440 017030 031760 101374 000440 000000 017360
00060: 031460 000132 000040 016000 000000 043560 007400 000440
00070: 017030 031460 000000 001546 000000 000000 000000 000000
00100: SAME: TO 000200-1


*T RECORD 1472 (%2700, #5C0)
00000: 036000 060156 166166 002254 000000 000040 006000 031460
00010: 000132 000040 000000 016000 041560 003000 002440 017035
00020: 000000 033760 000000 000500 017000 031760 000000 001004
00030: 000440 017340 033760 000003 000000 000441 017000 043561
00040: 000000 000501 000000 017000 121160 000000 000441 017000
00050: 000000 031460 000132 020040 005000 031760 000000 177777
00060: 000440 017030 017017 034001 000000 001116 031760 001013
00070: 000440 017360 000000 031460 000000 000000 000000 000000
00100: SAME: TO 000200-1


*T RECORD 1473 (%2701, #5C1)
00000: 036000 060156 173302 002332 000000 000023 000040 016000
00010: 031760 134736 000000 000440 017300 041560 000400 000440
00020: 000000 017070 031460 000132 000040 016000 000000 041560
00030: 000400 000440 017000 001740 000000 000000 120440 017030
00040: 031760 144735 000000 021440 017360 031460 000132 050040
00050: 000000 005000 031760 074476 000440 017340 000000 033760
00060: 177717 000441 017000 041561 000000 000000 000500 017030
00070: 033760 000020 000000 000441 000000 000000 000000 000000
00100: SAME: TO 000200-1


*T RECORD 1474 (%2702, #5C2)
00000: 036000 060156 005473 002410 000000 017000 031561 000132
00010: 000500 016070 000000 106106 034001 001134 031460 020563
00020: 000000 000040 006000 031460 000132 000040 000000 016000
00030: 031460 017610 000040 006000 000000 031460 000132 000040
```

327

```
00040: 016000 043560 000000 000600 000442 017000 043260 001144
00050: 000000 020441 005000 031460 002606 000040 000000 006000
00060: 031460 000132 000040 016000 000000 041560 004000 000440
00070: 017000 031460 000000 001151 000000 000000 000000 000000
00100: SAME: TO 000200-1

*T RECORD 1475 (%2703, #5C3)
00000: 036000 060156 132435 002466 000000 020040 005000 031760
00010: 130473 000440 000000 017300 031760 177777 000440 017070
00020: 000000 031460 000132 000040 016000 031760 000000 146314
00030: 000440 017300 062363 034001 000000 001152 041560 003000
00040: 000440 017000 000000 031460 001161 020040 005000 041560
00050: 000000 001000 000440 017000 031460 001160 000000 020040
00060: 005000 103760 000000 000441 000000 017000 031460 001161
00070: 000040 016000 000000 033760 000000 000000 000000 000000
00100: SAME: TO 000200-1

*T RECORD 1476 (%2704, #5C4)
00000: 036000 060156 013741 002544 000000 000002 000441 017000
00010: 031461 000000 000000 000440 017070 031760 151343 000440
00020: 000000 017300 041260 000000 000440 017070 000000 031760
00030: 146315 000440 017360 031760 000000 135023 000440 017300
00040: 031760 033234 000000 000440 017070 031460 000132 000040
00050: 000000 016000 141162 034001 001170 021760 000000 000000
00060: 000440 017030 031760 145655 000000 000440 017360 031460
00070: 000132 000040 000000 016000 000000 000000 000000 000000
00100: SAME: TO 000200-1

*T RECORD 1477 (%2705, #5C5)
00000: 036000 060156 055724 002622 000000 031760 144645 000440
00010: 017300 031460 000000 000023 000440 016070 041560 000400
00020: 000000 000440 017000 001740 000000 120440 000000 017030
00030: 031760 144734 000440 017360 000000 031460 001220 000040
00040: 016000 031760 000000 052505 000440 017030 041560 000400
00050: 000000 000440 017000 043260 001206 020441 000000 005000
00060: 033760 000030 000441 017000 000000 031760 052525 000440
00070: 017030 034545 000000 034001 000000 000000 000000 000000
00100: SAME: TO 000200-1

*T RECORD 1478 (%2706, #5C6)
00000: 036000 060156 064771 002700 000000 001206 033760 000002
00010: 000442 017000 000000 001562 074402 000440 017360 031760
00020: 000000 122546 000440 017300 031461 000132 000000 000440
00030: 016070 101760 000000 000440 000000 017030 031760 101374
00040: 000440 017360 000000 031760 145652 000440 017300 041260
00050: 000000 000023 000440 016070 031760 145652 000000 000440
00060: 017300 101760 000000 000440 000000 017070 031760 100001
00070: 000440 017030 000000 031760 000000 000000 000000 000000
00100: SAME: TO 000200-1

*T RECORD 1479 (%2707, #5C7)
00000: 036000 060156 046017 002756 000000 101374 000440 017360
00010: 031460 000132 000000 000040 016000 031760 145656 000440
00020: 000000 017300 012777 034001 001224 041560 000000 000400
00030: 000440 017000 001740 000000 000000 020440 017070 031460
00040: 000132 000040 000000 016000 031760 152653 000440 017300
00050: 000000 101760 000000 000440 017070 031760 000000 144644
00060: 000440 017360 031460 000132 000000 000040 016000 031460
```

```
00070: 000000 000440 000000 017030 000000 000000 000000 000000
00100: SAME: TO 000200-1


*T RECORD 1480 (%2710, #5C8)
00000: 036000 060156 021050 003034 000000 033760 152653 000440
00010: 017000 001560 000000 000030 000440 017360 031760 135022
00020: 000000 000440 017300 031760 036220 000440 000000 017070
00030: 031460 000132 000040 016000 000000 031760 145657 000440
00040: 017300 161265 000000 034001 001242 041560 000400 000440
00050: 000000 017000 001740 000000 020440 017070 000000 031460
00060: 000132 000040 016000 031760 000000 130476 000440 017300
00070: 041560 000400 000000 000440 000000 000000 000000 000000
00100: SAME: TO 000200-1


*T RECORD 1481 (%2711, #5C9)
00000: 036000 060156 167772 003112 000000 017000 001740 000000
00010: 020440 017070 000000 031460 000132 120040 005000 031760
00020: 000000 000002 000440 017070 031460 000132 000000 000040
00030: 016000 041560 000400 000440 000000 017000 031460 000132
00040: 020040 005000 000000 031760 146224 000440 017300 101760
00050: 000000 000000 000440 017070 031460 000132 000000 000040
00060: 016000 175030 034001 001260 000000 031460 001462 014040
00070: 006000 041561 000000 000040 000000 000000 000000 000000
00100: SAME: TO 000200-1


*T RECORD 1482 (%2712, #5CA)
00000: 036000 060156 064721 003170 000000 000440 017000 031460
00010: 001265 020040 000000 005000 031760 001650 000440 017030
00020: 000000 031460 017765 000040 006000 041561 000000 000020
00030: 000440 017000 031460 001271 000000 020040 005000 031760
00040: 001660 000440 000000 017030 031460 017774 000040 006000
00050: 000000 031460 000203 000040 006000 031460 000000 001333
00060: 144040 005000 103760 000000 000000 000442 017000 043260
00070: 000000 000443 000000 017000 000000 000000 000000 000000
00100: SAME: TO 000200-1


*T RECORD 1483 (%2713, #5CB)
00000: 036000 060156 115526 003246 000000 031760 000016 000440
00010: 017340 173654 000000 034001 001276 033760 000000 000500
00020: 000000 017000 031760 001007 000440 017340 000000 021760
00030: 000000 000500 017000 031460 000000 001305 020040 005000
00040: 021760 002000 000000 000440 017300 031460 001414 000440
00050: 000000 006030 031460 001333 000040 016000 000000 001563
00060: 145705 000440 017340 033760 000000 000000 000504 017140
00070: 033760 000000 000000 000502 000000 000000 000000 000000
00100: SAME: TO 000200-1


*T RECORD 1484 (%2714, #5CC)
00000: 036000 060156 161262 003324 000000 017000 001564 000004
00010: 000440 017340 000000 033760 000000 000504 017000 001564
00020: 000000 002000 000440 017340 033760 000000 000000 000504
00030: 017000 143753 034001 001314 000000 043564 001600 000444
00040: 017140 041562 000000 000000 000500 017030 031564 000000
00050: 000000 000500 017070 003563 000002 000443 000000 017000
00060: 111563 000006 000440 017000 000000 031460 001305 120040
00070: 005000 103760 000000 000000 000000 000000 000000 000000
00100: SAME: TO 000200-1
```

```
*T RECORD 1485 (%2715, #5CD)
00000: 036000 060156 056642 003402 000000 000442 017000 043260
00010: 000000 000443 000000 017000 031760 002000 000440 017300
00020: 000000 031460 001414 000440 006030 103760 000000 000000
00030: 000442 017000 033760 000665 000000 000443 017000 021760
00040: 002000 000440 000000 017300 103760 000000 000440 017030
00050: 000000 071473 034001 001332 031460 001414 000000 000040
00060: 006000 041561 000002 000440 000000 017000 031460 001342
00070: 020040 005000 000000 031760 000000 000000 000000 000000
00100: SAME: TO 000200-1

*T RECORD 1486 (%2716, #5CE)
00000: 036000 060156 101212 003460 000000 000017 000440 017340
00010: 033760 000002 000000 000442 017000 043260 000000 000443
00020: 000000 017000 021760 004000 000440 017300 000000 033760
00030: 001414 000500 006000 041561 000000 000010 000440 017000
00040: 031460 001366 000000 020040 005000 033760 000020 000442
00050: 000000 017000 043260 000000 000443 017000 000000 031760
00060: 135026 000440 017340 031760 000000 000000 000500 017000
00070: 106767 034001 000000 001350 000000 000000 000000 000000
00100: SAME: TO 000200-1

*T RECORD 1487 (%2717, #5CF)
00000: 036000 060156 137661 003536 000000 031460 001353 014040
00010: 005000 031760 000000 101364 000440 017340 031760 000000
00020: 000000 000500 017000 101760 144736 000040 000000 017340
00030: 033760 000000 000100 017240 000000 031760 000000 000100
00040: 017300 041260 000000 000000 000040 017030 001361 001414
00050: 000000 120040 002000 031460 001366 000040 000000 016000
00060: 031760 145647 000440 017340 000000 003562 000000 000502
00070: 017000 001562 000000 014000 000000 000000 000000 000000
00100: SAME: TO 000200-1

*T RECORD 1488 (%2720, #5D0)
00000: 036000 060156 175140 003614 000000 014440 017760 031760
00010: 000007 000440 000000 017030 031760 010000 014440 017760
00020: 000000 062014 034001 001366 031760 001007 000000 000440
00030: 017340 031760 000000 000500 000000 017000 031460 001376
00040: 120040 005000 000000 031760 134400 014440 017740 033760
00050: 000000 000000 002500 017034 031460 001776 000000 000040
00060: 006000 031760 134000 014440 000000 017740 031460 001765
00070: 000040 006000 000000 031760 000000 000000 000000 000000
00100: SAME: TO 000200-1

*T RECORD 1489 (%2721, #5D1)
00000: 036000 060156 142535 003672 000000 001000 000440 017300
00010: 041260 000000 000000 000440 007070 031760 145653 000440
00020: 000000 017340 021760 000000 000500 017070 000000 031460
00030: 001410 120040 005000 031760 000000 000020 000440 017070
00040: 173665 034001 000000 001404 101760 000000 000440 017030
00050: 000000 031760 144733 000440 017360 031760 000000 145651
00060: 000440 017340 031760 145650 000000 000440 017360 031760
00070: 145654 000440 000000 017340 000000 000000 000000 000000
00100: SAME: TO 000200-1

*T RECORD 1490 (%2722, #5D2)
00000: 036000 060156 116154 003750 000000 031760 000000 000500
00010: 017000 031460 000000 000000 020040 007000 021760 000000
```

330

EP 0 455 351 A2

```
00020: 000000 000500 007070 001562 014000 014440 000000 017760
00030: 001563 010000 054440 017760 000000 013460 000000 000440
00040: 017140 031460 000000 001416 140040 005000 031460 000000
00050: 000000 000040 017000 031460 000000 000040 000000 017000
00060: 142577 034001 001422 033760 000000 000040 034442 017400
00070: 031760 145647 000000 000440 000000 000000 000000 000000
00100: SAME: TO 000200-1

*T RECORD 1491 (%2723, #5D3)
00000: 036000 060156 122732 004026 000000 017340 043562 000000
00010: 000502 017000 000000 001562 014000 014440 017760 031460
00020: 000000 000000 000040 007000 031463 000000 000000 000440
00030: 017030 031460 000000 000100 000000 015000 031760 000337
00040: 000440 017340 000000 031760 000000 000500 017000 031460
00050: 000000 001437 020040 005000 033760 000014 000000 000442
00060: 017000 031760 042400 000440 000000 017030 031460 001441
00070: 000040 016000 000000 033760 000000 000000 000000 000000
00100: SAME: TO 000200-1

*T RECORD 1492 (%2724, #5D4)
00000: 036000 060156 121263 004104 000000 000060 000442 017000
00010: 170243 034001 000000 001440 031760 042000 000440 017030
00020: 000000 031461 000000 000500 015030 031460 000000 000000
00030: 000100 015000 033760 001000 000000 000443 017000 043260
00040: 000000 000441 000000 017000 031760 043000 014440 017740
00050: 000000 041562 000000 000500 017000 031460 000000 001455
00060: 020040 005000 103461 000000 000000 000441 017000 031460
00070: 001445 120040 000000 005000 000000 000000 000000 000000
00100: SAME: TO 000200-1

*T RECORD 1493 (%2725, #5D5)
00000: 036000 060156 000516 004162 000000 013463 000000 000443
00010: 017000 031460 000000 001444 120040 005000 031760 043406
00020: 000000 014440 017760 031460 000000 000440 000000 011030
00030: 001503 034001 001456 033760 000000 000000 000401 011000
00040: 031760 000000 000000 014400 017760 031460 000000 000040
00050: 000000 011000 033760 000000 000403 007000 000000 031760
00060: 000102 000440 017340 031760 000000 000000 002500 017036
00070: 033760 000000 000000 020500 000000 000000 000000 000000
00100: SAME: TO 000200-1

*T RECORD 1494 (%2726, #5D6)
00000: 036000 060156 110367 004240 000000 007000 001560 000000
00010: 000440 017700 000000 031760 000000 014440 017470 031760
00020: 000000 000040 014440 017570 031760 000000 000000 014440
00030: 017570 031760 000600 014440 000000 017570 001560 000020
00040: 000440 017700 000000 031760 000024 014440 017470 141176
00050: 000000 034001 001474 031760 000021 014440 000000 017570
00060: 001560 000037 000440 017760 000000 001560 000030 000440
00070: 017760 031760 000000 144742 000000 000000 000000 000000
00100: SAME: TO 000200-1

*T RECORD 1495 (%2727, #5D7)
00000: 036000 060156 132127 004316 000000 000440 017340 033760
00010: 000002 000442 000000 017000 121562 000000 000500 017000
00020: 000000 031460 001505 120040 005000 031760 000000 001000
00030: 000440 017030 031760 001302 000000 014440 017760 031460
00040: 000000 000040 000000 007000 031760 101416 000440 017340
```

331

```
00050: 000000 033760 000000 000501 017000 121561 000000 000074
00060: 000440 017000 031460 000000 000000 040040 007000 044677
00070: 034001 001512 000000 031460 000000 000000 000000 000000
00100: SAME: TO 000200-1


*T RECORD 1496 (%2730, #5D8)
00000: 036000 060156 066653 004374 000000 000000 000440 017030
00010: 031760 101372 000000 000440 017360 031760 101415 000440
00020: 000000 017360 031460 000000 000040 007000 000000 031760
00030: 101417 000440 017340 033760 000000 000000 000500 017000
00040: 031460 000000 000000 014040 007000 011460 000000 000440
00050: 000000 017070 001560 074361 000440 017340 000000 101760
00060: 000000 000500 017030 031760 000000 101362 000440 017360
00070: 021760 000000 000000 000440 000000 000000 000000 000000
00100: SAME: TO 000200-1


*T RECORD 1497 (%2731, #5D9)
00000: 036000 060156 117371 004452 000000 017030 031760 101416
00010: 000440 017360 000000 031460 000000 000040 007000 070461
00020: 000000 034001 001530 033760 101413 000441 000000 017000
00030: 111560 000011 000440 017000 000000 031460 001534 014040
00040: 005000 033760 000000 101414 000441 017000 031461 000000
00050: 000000 000440 017340 013460 000000 000441 000000 017000
00060: 037461 000012 000641 017002 000000 033760 007777 000442
00070: 017000 041562 000000 000000 000000 000000 000000 000000
00100: SAME: TO 000200-1


*T RECORD 1498 (%2732, #5DA)
00000: 036000 060156 037557 004530 000000 003420 017010 031561
00010: 000000 003420 000000 017010 031760 000000 000700 017034
00020: 000000 033760 000003 000441 017000 041561 000000 000000
00030: 000500 017000 031460 000000 000000 000040 007000 021073
00040: 034001 001546 000000 031460 000000 000440 017000 031460
00050: 000000 001635 020040 005000 113560 000400 000000 000440
00060: 017030 035460 000006 000640 000000 017002 111560 000010
00070: 000440 017000 000000 031460 000000 000000 000000 000000
00100: SAME: TO 000200-1


*T RECORD 1499 (%2733, #5DB)
00000: 036000 060156 113267 004606 000000 000000 140040 007000
00010: 031760 145703 000000 000440 017360 001560 145713 000440
00020: 000000 017340 033760 000000 000502 017340 000000 031760
00030: 145310 000440 017360 103462 000000 000000 000442 017340
00040: 101462 000000 000000 000500 015340 033760 000000 000500
00050: 000000 017140 033760 000000 000501 017140 000000 174212
00060: 034001 001564 033760 000000 000000 000502 017140 033760
00070: 000000 000503 000000 017140 000000 000000 000000 000000
00100: SAME: TO 000200-1


*T RECORD 1500 (%2734, #5DC)
00000: 036000 060156 011320 004664 000000 031760 000000 000500
00010: 017700 031460 000000 000000 000040 017140 031460 000000
00020: 000000 000100 015140 101760 000000 000500 000000 017000
00030: 031460 001577 020040 005000 000000 031760 145704 000440
00040: 017360 031760 000000 000145 000440 017340 033760 010000
00050: 000000 000444 017000 031564 000000 000500 000000 017070
00060: 001560 000001 000440 017000 000000 031460 001617 020040
00070: 005000 031760 000000 145306 000000 000000 000000 000000
```

EP 0 455 351 A2

```
00100: SAME: TO 000200-1

*T RECORD 1501 (%2735, #5DD)
00000: 036000 060156 004554 004742 000000 000440 017340 075507
00010: 034001 001602 000000 031760 000000 000500 017000 031460
00020: 000000 001606 120440 005030 031760 000101 000000 000440
00030: 017360 031760 101410 000440 000000 017360 031460 000000
00040: 000440 017030 000000 033760 001000 000440 017000 031460
00050: 000000 000000 000100 015000 031760 145703 000000 000440
00060: 017340 121560 000000 000500 000000 011000 033760 000000
00070: 000000 017000 000000 041260 000000 000000 000000 000000
00100: SAME: TO 000200-1

*T RECORD 1502 (%2736, #5DE)
00000: 036000 060156 121155 005020 000000 001617 120440 005030
00010: 031760 154221 000000 000440 017360 031760 154264 000440
00020: 000000 017360 031460 000000 000040 011000 000000 014460
00030: 034001 001620 101760 000000 000000 000400 017000 031760
00040: 001623 020400 000000 005030 031760 101376 000440 017360
00050: 000000 101461 000000 000440 017000 031460 000000 001631
00060: 020040 005000 031760 001642 000000 000440 017030 031460
00070: 017765 000040 000000 006000 000000 000000 000000 000000
00100: SAME: TO 000200-1

*T RECORD 1503 (%2737, #5DF)
00000: 036000 060156 131607 005076 000000 031760 001645 000440
00010: 017030 031460 000000 017774 000040 006000 031460 000000
00020: 000000 000040 011000 033760 000000 000401 000000 017000
00030: 031760 030606 000440 017030 000000 031460 017774 000040
00040: 006000 101760 000000 000000 000440 017030 071336 034001
00050: 000000 001636 031760 144732 000440 017360 000000 041260
00060: 000000 000440 017030 031760 000000 134720 000440 017360
00070: 031460 000000 000000 000040 000000 000000 000000 000000
00100: SAME: TO 000200-1

*T RECORD 1504 (%2740, #5E0)
00000: 036000 060156 135671 005154 000000 007000 031461 000000
00010: 000440 017030 000000 001560 000022 000440 017360 031462
00020: 000000 000000 000440 007170 031463 000000 000000 000440
00030: 017030 001560 000022 000440 000000 017360 031760 000000
00040: 000540 007170 000000 001560 000027 000440 017340 021760
00050: 000000 000000 000500 017340 031760 000000 000000 000500
00060: 017700 031460 000000 000040 000000 017140 051501 034001
00070: 001654 031460 000000 000000 000000 000000 000000 000000
00100: SAME: TO 000200-1

*T RECORD 1505 (%2741, #5E1)
00000: 036000 060156 125062 005232 000000 014040 017460 031460
00010: 000000 000040 000000 017140 031460 000000 014040 017560
00020: 000000 031460 000000 000040 007000 001560 000000 000027
00030: 000440 017340 033760 000003 000000 000440 017000 121560
00040: 000000 000500 000000 017340 001560 000000 000520 017300
00050: 000000 101760 000000 000500 017700 031460 000000 000000
00060: 000040 017040 023760 000000 000000 000540 017000 031460
00070: 000000 014040 000000 017560 000000 000000 000000 000000
00100: SAME: TO 000200-1

*T RECORD 1506 (%2742, #5E2)
```

333

```
00000: 036000 060156 174717 005310 000000 031460 000000 000040
00010: 017140 031460 000000 000000 014040 017560 031166 034001
00020: 000000 001672 031460 000000 000040 017140 000000 001560
00030: 000021 014440 017760 031460 000000 000000 000040 017140
00040: 031760 000000 000000 000500 017000 001540 000036 020440
00050: 000000 017700 031460 000000 000040 017460 000000 031460
00060: 000000 000040 007000 031760 000000 145610 000440 017340
00070: 033760 000000 000000 000501 000000 000000 000000 000000
00100: SAME: TO 000200-1

*T RECORD 1507 (%2743, #5E3)
00000: 036000 060156 146162 005366 000000 017000 031460 001716
00010: 120040 005000 000000 031460 002041 000040 006000 031460
00020: 000000 000000 050040 007000 031760 145610 000000 000440
00030: 017300 101760 000000 000440 000000 017070 177061 034001
00040: 001710 041560 000000 000017 000440 017030 031760 145611
00050: 000000 000440 017360 031460 000000 001440 000000 017034
00060: 033760 000017 000440 017000 000000 031760 145612 000440
00070: 017300 041560 000000 000000 000000 000000 000000 000000
00100: SAME: TO 000200-1

*T RECORD 1508 (%2744, #5E4)
00000: 036000 060156 035673 005444 000000 000500 007070 101760
00010: 000000 000500 000000 017070 001561 145613 000440 017300
00020: 000000 041560 000377 000440 017270 031760 000000 145612
00030: 000440 017340 121561 000000 000000 000500 017000 031460
00040: 000000 120040 000000 007000 041260 000000 000440 017030
00050: 000000 031760 145610 000440 017360 157513 000000 034001
00060: 001726 031760 145611 000440 000000 017340 023760 000000
00070: 000500 017000 000000 001560 000000 000000 000000 000000
00100: SAME: TO 000200-1

*T RECORD 1509 (%2745, #5E5)
00000: 036000 060156 123242 005522 000000 145637 000440 017340
00010: 031460 000000 000000 000100 015000 031460 000000 000040
00020: 000000 007000 033760 135032 000442 017000 000000 003562
00030: 000002 000442 017340 103760 000000 000000 000501 017140
00040: 011461 000000 000000 000040 017360 031460 001734 120040
00050: 000000 005000 101760 000000 000440 017030 000000 031760
00060: 135030 000440 017360 031460 000000 000000 000040 007000
00070: 023760 130503 000000 000440 000000 000000 000000 000000
00100: SAME: TO 000200-1

*T RECORD 1510 (%2746, #5E6)
00000: 036000 060156 056441 005600 000000 017000 143321 034001
00010: 001744 023760 000000 131103 000441 017000 031460 027754
00020: 000000 000040 006000 031460 000000 000040 000000 007000
00030: 031760 145613 000440 017340 000000 033760 000000 000500
00040: 017140 031760 000000 000000 002500 017034 033560 000000
00050: 000000 000500 017000 031760 001007 000440 000000 017340
00060: 031760 000000 000500 017000 000000 031460 001757 120040
00070: 005000 073460 000000 000000 000000 000000 000000 000000
00100: SAME: TO 000200-1

*T RECORD 1511 (%2747, #5E7)
00000: 036000 060156 176554 005656 000000 000440 017000 031760
00010: 101363 000440 000000 017300 041560 000777 000440 017070
00020: 000000 031460 000000 000040 007000 070133 000000 034001
```

```
00030: 001762 031760 145613 000440 000000 017340 031460 000071
00040: 000040 016000 000000 031760 145613 000440 017340 033760
00050: 000000 000377 000440 017000 043560 000000 000000 000500
00060: 017000 041560 000200 000440 000000 017000 031460 001772
00070: 020040 005000 000000 033560 000000 000000 000000 000000
00100: SAME: TO 000200-1

*T RECORD 1512 (%2750, #5E8)
00000: 036000 060156 147112 005734 000000 177400 000440 017000
00010: 031760 101402 000000 000440 017340 121560 000000 000500
00020: 000000 007070 031760 145613 000440 017340 000000 033760
00030: 000000 000500 017140 033760 000000 000000 005501 017000
00040: 043561 000377 000000 000441 017000 032301 034001 002000
00050: 000000 041561 000200 000440 017000 031460 000000 002003
00060: 020040 005000 033561 177400 000000 000441 017000 001700
00070: 145701 000440 000000 017340 000000 000000 000000 000000
00100: SAME: TO 000200-1

*T RECORD 1513 (%2751, #5E9)
00000: 036000 060156 153256 006012 000000 001561 000000 151500
00010: 017070 033460 000000 001777 050441 005000 031460 000000
00020: 000000 000040 007000 031760 145613 000440 000000 017340
00030: 033760 000000 000500 017140 000000 033760 000000 005501
00040: 017140 031760 000000 000000 001500 017034 031760 145625
00050: 000000 000440 017360 043561 000377 000441 000000 017000
00060: 041561 000200 000440 017000 000000 171037 034001 002016
00070: 031460 002020 000000 020040 000000 000000 000000 000000
00100: SAME: TO 000200-1

*T RECORD 1514 (%2752, #5EA)
00000: 036000 060156 161021 006070 000000 005000 033561 177400
00010: 000441 017000 000000 001700 145701 000440 017340 001561
00020: 000000 000000 151500 017070 033460 002014 000000 050441
00030: 005000 031460 000000 000040 000000 007000 031760 145607
00040: 000440 017340 000000 031760 000000 000500 017000 031460
00050: 000000 000000 120040 007000 031760 145613 000000 000440
00060: 017340 033760 000000 000502 000000 017140 031760 000000
00070: 002500 017034 000000 033562 000000 000000 000000 000000
00100: SAME: TO 000200-1

*T RECORD 1515 (%2753, #5EB)
00000: 036000 060156 133427 006146 000000 000000 000502 017140
00010: 033760 000000 000000 000501 017140 044014 034001 002034
00020: 000000 031760 000000 002500 017034 033561 000000 000000
00030: 000501 017140 033760 000000 000000 000500 017000 031462
00040: 020112 000440 000000 006030 031460 000000 000040 007000
00050: 000000 043560 000377 005440 017000 031760 000000 145626
00060: 000440 017340 111560 000000 000000 000500 017140 031760
00070: 000000 020500 000000 007000 000000 000000 000000 000000
00100: SAME: TO 000200-1

*T RECORD 1516 (%2754, #5EC)
00000: 036000 060156 163121 006224 000000 002043 000000 015040
00010: 003000 033760 000000 000000 000460 037070 031760 001012
00020: 000000 000440 017300 041560 000004 000440 000000 017030
00030: 031460 002053 120040 005000 000000 104237 034001 002052
00040: 031760 100000 000000 000440 017030 031460 000000 000040
00050: 000000 017060 031460 000004 000040 037320 000000 101760
```

335

```
00060: 000000 000440 017030 031760 000000 134735 000440 017360
00070: 031760 001010 000000 000440 000000 000000 000000 000000
00100: SAME: TO 000200-1


*T RECORD 1517 (%2755, #5ED)
00000: 036000 060156 015352 006302 000000 017360 031760 001011
00010: 000440 017340 000000 031460 002070 000040 006000 031760
00020: 000000 000001 000440 017030 031760 110000 000000 004440
00030: 017760 031460 000000 000040 000000 007000 101760 000000
00040: 000440 017030 000000 031760 001011 000440 017360 031760
00050: 000000 001010 000440 017340 006046 012001 000000 002070
00060: 031760 000000 000500 017000 000000 041260 000000 020440
00070: 007070 033760 000000 001440 000000 000000 000000 000000
00100: SAME: TO 000200-1


*T RECORD 1518 (%2756, #5EE)
00000: 036000 060156 052021 006360 000000 000440 017000 013460
00010: 002073 120440 000000 005000 031460 000000 000040 007000
00020: 000000 025573 017000 145555 000132 001061 000000 001071
00030: 000132 001103 001120 001123 000000 001134 001136 001140
00040: 001106 001170 000000 001173 032766 001175 001201 002164
00050: 000000 001223 001241 001227 001233 001245 000000 001253
00060: 000132 001212 001216 000000 000000 000000 000000 000000
00070: 035124 033000 000000 145625 000000 000000 000000 000000
00100: SAME: TO 000200-1


*T RECORD 1519 (%2757, #5EF)
00000: 036000 060156 107256 006436 000000 000000 000041 000022
00010: 000023 000044 000000 000125 000026 000067 000030 177777
00020: 000000 001747 001762 001764 001774 002024 000000 001743
00030: 002007 001733 000000 000000 000000 000000 000000 000020
00040: 000000 000000 000000 000000 000000 000000 000001 000005
00050: 000000 000011 000002 000006 000012 000003 000000 000007
00060: 000013 000004 000010 000014 000000 000000 000000 000000
00070: 177777 000000 000000 000000 000000 000000 000000 000000
00100: SAME: TO 000200-1


*T RECORD 1520 (%2760, #5F0)
00000: 036000 060156 010721 006514 000000 000000 000000 134126
00010: 177577 134251 000000 177377 134374 176777 011457 034000
00020: 000000 145713 145723 145734 145745 145756 000000 145767
00030: 146000 146011 146022 000001 000000 000000 000013 000000
00040: 001000 000000 000000 000600 000000 000000 000001 000000
00050: 000000 000013 000000 000753 000000 000600 000000 000000
00060: 000001 000000 000005 000012 000000 177777 177777 177777
00070: 177777 000000 000000 000002 000000 000000 000000 000000
00100: SAME: TO 000200-1


*T RECORD 1521 (%2761, #5F1)
00000: 036000 060156 113053 006572 000000 000001 000000 000010
00010: 000000 001000 000000 000000 000600 000001 177777 000001
00020: 000000 000005 000010 177777 177777 177777 000000 177777
00030: 000000 177777 000001 000000 000000 000013 033016 014000
00040: 146003 000000 000000 001000 000000 000600 000000 177777
00050: 000000 000000 000000 000013 000000 001000 000000 000000
00060: 000600 000000 000000 000000 000000 000000 000012 000000
00070: 001000 000000 000000 000600 000000 000000 000000 000000
00100: SAME: TO 000200-1
```

```
*T RECORD 1522 (%2762, #5F2)
00000: 004000 060103 042206 006650 000000 000000 000002 153231
00010: 000000 000000 000000 000000 000000 000000 000000 000000
00020: SAME: TO 000200-1

*T RECORD 1523 (%2763, #5F3)
00000: 002000 120000 120000 000000 000000 000000 000000 000000
00010: SAME: TO 000200-1

*T RECORD 1524 (%2764, #5F4)
00000: 025000 020000 143022 077114 051117 052040 005261 000000
00010: SAME: TO 000020-1
00020: 000000 020040 046101 051107 042440 051117 052101 052105
00030: 027040 047523 047101 052040 020040 020040 020040 020040
00040: 036070 033461 031063 030456 030471 030462 037040 020040
00050: 020040 020040 000000 000000 000000 000000 000000 000000
00060: SAME: TO 000200-1

*T RECORD 1525 (%2765, #5F5)
00000: 003400 040001 062234 077114 051117 052000 000000 000000
00010: SAME: TO 000200-1

*T RECORD 1526 (%2766, #5F6)
00000: 036000 060156 026443 000000 000000 005260 001400 146071
00010: 000000 000000 000000 000000 146071 001000 146110 001000
00020: 000000 000600 147710 001000 146160 000000 000000 000001
00030: 146161 000400 146164 100005 000000 046171 011400 146171
00040: 000000 000000 000000 043575 015767 000000 000000 040000
00050: 000000 000004 060000 000022 000000 000000 000000 000000
00060: 000000 000000 000000 000001 000000 000000 000001 150005
00070: 034001 030764 000000 031460 000000 000000 000000 000000
00100: SAME: TO 000200-1

*T RECORD 1527 (%2767, #5F7)
00000: 036000 060156 025745 000056 000000 000000 000440 017070
00010: 031461 000000 000000 000440 007170 031461 000000 000440
00020: 000000 017340 033760 000000 000502 017140 000000 033760
00030: 000000 000503 017000 031460 000000 000000 000440 017340
00040: 033760 000000 000000 000500 017140 033760 000000 000501
00050: 000000 007000 031460 000000 000040 017040 000000 033760
00060: 000000 000500 017140 033760 000000 000000 000501 007000
00070: 101760 000000 000000 000440 000000 000000 000000 000000
00100: SAME: TO 000200-1

*T RECORD 1528 (%2770, #5F8)
00000: 036000 060156 144376 000134 000000 017030 031760 146160
00010: 000440 017360 000000 031760 000003 000440 017030 141040
00020: 000000 034001 031002 031760 101376 000440 000000 017360
00030: 031760 101416 000440 017340 000000 033760 000000 000500
00040: 017000 001560 000000 074402 000440 017340 033760 001400
00050: 000000 000440 017000 043560 000000 000500 000000 017000
00060: 111560 001000 000440 017000 000000 031460 000000 020040
00070: 007000 030760 000000 000060 000000 000000 000000 000000
00100: SAME: TO 000200-1

*T RECORD 1529 (%2771, #5F9)
00000: 036000 060156 000160 000212 000000 005440 017000 031460
```

EP 0 455 351 A2

```
00010: 030562 000040 000000 006000 031460 025732 000040 006000
00020: 000000 031760 146160 000440 017340 021760 000000 000000
00030: 000500 017000 031460 031026 000000 020040 005140 152302
00040: 034001 031020 000000 021760 000000 005500 017000 031760
00050: 000000 031354 020500 005000 031460 031356 000000 020040
00060: 006000 031760 146161 000440 000000 017300 101760 000000
00070: 000440 017070 000000 031460 000000 000000 000000 000000
00100: SAME: TO 000200-1

*T RECORD 1530 (%2772, #5FA)
00000: 036000 060156 122210 000270 000000 031354 000040 016000
00010: 031760 000000 000000 005500 017000 031460 031356 020040
00020: 000000 006000 031760 146161 000440 017340 000000 021760
00030: 000000 000500 017000 041260 000000 031126 120440 005070
00040: 031760 146067 000000 000440 017360 031460 032125 000040
00050: 000000 006160 031460 020056 000040 006000 000000 050206
00060: 034001 031036 031460 031665 000000 000040 006000 031460
00070: 020065 000040 000000 006000 000000 000000 000000 000000
00100: SAME: TO 000200-1

*T RECORD 1531 (%2773, #5FB)
00000: 036000 060156 163672 000346 000000 031460 031714 000040
00010: 006000 031460 000000 031743 000040 006000 031760 146033
00020: 000000 000440 017030 033760 000000 000500 000000 017000
00030: 031760 146037 000440 017030 000000 033760 000000 000501
00040: 017000 031460 000000 030766 000040 006000 031460 015024
00050: 000000 000040 006000 031760 146053 000440 000000 017300
00060: 031460 030764 000040 006000 000000 031760 146053 000440
00070: 017030 033760 000000 000000 000000 000000 000000 000000
00100: SAME: TO 000200-1

*T RECORD 1532 (%2774, #5FC)
00000: 036000 060156 104161 000424 000000 000500 017000 125116
00010: 034001 031054 000000 031760 146177 000440 017030 033760
00020: 000000 000000 000501 017000 031460 030766 000000 000040
00030: 006000 031460 015140 000040 000000 006000 031760 146053
00040: 000440 017300 000000 031460 030764 000040 006000 031760
00050: 000000 146035 000440 017030 033760 000000 000000 000500
00060: 017000 031760 146051 000440 000000 017030 033760 000000
00070: 000501 017000 000000 031460 000000 000000 000000 000000
00100: SAME: TO 000200-1

*T RECORD 1533 (%2775, #5FD)
00000: 036000 060156 015421 000502 000000 030766 000040 006000
00010: 031460 015024 000000 000040 006000 031760 146055 000440
00020: 000000 017300 031460 030764 000040 006000 000000 047033
00030: 034001 031072 031760 146055 000000 000440 017030 033760
00040: 000000 000500 000000 017000 031760 146177 000440 017030
00050: 000000 033760 000000 000501 017000 031460 000000 030766
00060: 000040 006000 031460 015140 000000 000040 006000 031760
00070: 146055 000440 000000 017300 000000 000000 000000 000000
00100: SAME: TO 000200-1

*T RECORD 1534 (%2776, #5FE)
00000: 036000 060156 151020 000560 000000 031460 030764 000040
00010: 006000 031760 000000 146053 000440 017300 031460 030774
00020: 000000 000040 006000 031460 014747 000040 000000 006000
00030: 031760 146057 000440 017300 000000 031460 000000 000440
```

338

```
00040:  017070 031760 000000 146055 000440 017300 174320 034001
00050:  000000 031110 031460 030774 000040 006000 000000 031460
00060:  014747 000040 006000 031760 000000 146060 000440 017300
00070:  031460 000000 000000 000440 000000 000000 000000 000000
00100:  SAME: TO 000200-1

*T RECORD 1535 (%2777, #5FF)
00000:  036000 060156 127201 000636 000000 017070 043260 000000
00010:  000455 017000 000000 031760 146162 000440 017340 031460
00020:  000000 031752 000040 006000 031760 146071 000000 000440
00030:  017300 121560 000000 000500 000000 017070 033760 000002
00040:  000455 017000 000000 031760 146163 000440 017340 031460
00050:  000000 031752 000040 006000 031760 146072 000000 000440
00060:  017300 121560 000000 000500 000000 017070 014553 034001
00070:  031126 031760 000000 146163 000000 000000 000000 000000
00100:  SAME: TO 000200-1

*T RECORD 1536 (%3000, #600)
00000:  036000 060156 033645 000714 000000 000440 017340 033760
00010:  000000 000500 000000 017000 001560 000045 000440 017340
00020:  000000 031760 146130 000440 017360 031460 000000 031743
00030:  000040 006000 031760 146130 000000 000440 017340 033760
00040:  014744 000500 000000 006000 031760 146130 000440 017300
00050:  000000 031460 030764 000040 006000 031760 000000 146130
00060:  000440 017030 033760 000000 000000 000500 017000 031760
00070:  146173 000440 000000 017030 000000 000000 000000 000000
00100:  SAME: TO 000200-1

*T RECORD 1537 (%3001, #601)
00000:  036000 060156 035034 000772 000000 033760 000000 000501
00010:  017000 031460 000000 030766 000040 006000 150233 034001
00020:  000000 031144 031460 015112 000040 006000 000000 031760
00030:  146130 000440 017300 031460 000000 030764 000040 006000
00040:  031460 024732 000000 000040 006000 031760 146132 000440
00050:  000000 017300 031460 030764 000040 006000 000000 031760
00060:  146130 000440 017300 031460 000000 030774 000040 006000
00070:  031460 024733 000000 000040 000000 000000 000000 000000
00100:  SAME: TO 000200-1

*T RECORD 1538 (%3002, #602)
00000:  036000 060156 047663 001050 000000 006000 031760 146134
00010:  000440 017300 000000 031460 030764 000040 006000 031760
00020:  000000 146071 000440 017340 033760 000000 000000 000500
00030:  017000 031760 146057 000440 000000 017340 035611 034001
00040:  031162 001560 000000 000000 000500 017030 031760 146146
00050:  000000 000440 017360 031760 146072 000440 000000 017340
00060:  033760 000000 000500 017140 000000 033760 000000 000501
00070:  017000 031760 000000 146060 000000 000000 000000 000000
00100:  SAME: TO 000200-1

*T RECORD 1539 (%3003, #603)
00000:  036000 060156 006636 001126 000000 000440 017340 001560
00010:  000000 000500 000000 017030 031760 146147 000440 017360
00020:  000000 031760 146175 000440 017030 033760 000000 000000
00030:  000500 017000 031760 146053 000000 000440 017030 033760
00040:  000000 000501 000000 017000 031460 030766 000040 006000
00050:  000000 031460 015027 000040 006000 057740 000000 034001
00060:  031200 031760 146100 000440 000000 017300 031460 030764
```

```
00070: 000040 006000 000000 031760 000000 000000 000000 000000
00100: SAME: TO 000200-1


*T RECORD 1540 (%3004, #604)
00000: 036000 060156 076442 001204 000000 146175 000440 017030
00010: 033760 000000 000000 000500 017000 031760 146055 000440
00020: 000000 017030 033760 000000 000501 017000 000000 031460
00030: 030766 000040 006000 031460 000000 015027 000040 006000
00040: 031760 146102 000000 000440 017300 031460 030764 000040
00050: 000000 006000 031760 146146 000440 017340 000000 033760
00060: 014744 000500 006000 031760 000000 146104 000440 017300
00070: 031460 030764 000000 000040 000000 000000 000000 000000
00100: SAME: TO 000200-1


*T RECORD 1541 (%3005, #605)
00000: 036000 060156 136176 001262 000000 006000 016764 034001
00010: 031216 031760 000000 146147 000440 017340 033760 014744
00020: 000000 000500 006000 031760 146106 000440 000000 017300
00030: 031460 030764 000040 006000 000000 031760 146033 000440
00040: 017300 031460 000000 030774 000040 006000 031760 146120
00050: 000000 000440 017300 031460 030764 000040 000000 006000
00060: 031760 146035 000440 017300 000000 031460 030774 000040
00070: 006000 031760 000000 146122 000000 000000 000000 000000
00100: SAME: TO 000200-1


*T RECORD 1542 (%3006, #606)
00000: 036000 060156 010070 001340 000000 000440 017300 031460
00010: 030764 000040 000000 006000 031460 031624 000040 006000
00020: 000000 031760 146124 000440 017300 015625 000000 034001
00030: 031234 031460 030774 000040 000000 006000 031460 014747
00040: 000040 006000 000000 031760 146150 000440 017300 031460
00050: 000000 000000 000440 017070 031760 146063 000000 000440
00060: 017360 031460 000000 000040 000000 017160 031760 146126
00070: 000440 017300 000000 031460 000000 000000 000000 000000
00100: SAME: TO 000200-1


*T RECORD 1543 (%3007, #607)
00000: 036000 060156 056740 001416 000000 030774 000040 006000
00010: 031460 014747 000000 000040 006000 031760 146151 000440
00020: 000000 017300 031460 000000 000440 017070 000000 031760
00030: 146065 000440 017360 031460 000000 000000 000040 017160
00040: 031760 146037 000000 000440 017300 150440 034001 031252
00050: 000000 031460 030774 000040 006000 031760 000000 146120
00060: 000440 017300 031460 030764 000000 000040 006000 031760
00070: 146041 000440 000000 017300 000000 000000 000000 000000
00100: SAME: TO 000200-1


*T RECORD 1544 (%3010, #608)
00000: 036000 060156 130702 001474 000000 031460 030774 000040
00010: 006000 031760 000000 146122 000440 017300 031460 030764
00020: 000000 000040 006000 031460 031624 000040 000000 006000
00030: 031760 146124 000440 017300 000000 031460 030774 000040
00040: 006000 031460 000000 014747 000040 006000 031760 146152
00050: 000000 000440 017300 031460 000000 000440 000000 017070
00060: 031460 032010 000040 006000 000000 115642 034001 031270
00070: 031760 146126 000000 000440 000000 000000 000000 000000
00100: SAME: TO 000200-1
```

```
*T RECORD 1545 (%3011, #609)
00000: 036000 060156 015423 001552 000000 017300 031460 030774
00010: 000040 006000 000000 031460 014747 000040 006000 031760
00020: 000000 146153 000440 017300 031460 000000 000000 000440
00030: 017070 031460 032021 000040 000000 006000 031760 146043
00040: 000440 017300 000000 031460 030774 000040 006000 031760
00050: 000000 146120 000440 017300 031460 030764 000000 000040
00060: 006000 031760 146045 000440 000000 017300 031460 030774
00070: 000040 006000 000000 031760 000000 000000 000000 000000
00100: SAME: TO 000200-1

*T RECORD 1546 (%3012, #60A)
00000: 036000 060156 045053 001630 000000 146122 000440 017300
00010: 031460 030764 000000 000040 006000 044317 034001 031306
00020: 000000 031460 031624 000040 006000 031760 000000 146124
00030: 000440 017300 031460 030774 000000 000040 006000 031460
00040: 014747 000040 000000 006000 031760 146154 000440 017300
00050: 000000 031460 000000 000440 017070 031460 000000 032010
00060: 000040 006000 031760 146126 000000 000440 017300 031460
00070: 030774 000040 000000 006000 000000 000000 000000 000000
00100: SAME: TO 000200-1

*T RECORD 1547 (%3013, #60B)
00000: 036000 060156 025347 001706 000000 031460 014747 000040
00010: 006000 031760 000000 146155 000440 017300 031460 000000
00020: 000000 000440 017070 031460 032021 000040 000000 006000
00030: 031760 146047 000440 017300 000000 063463 034001 031324
00040: 031460 030774 000000 000040 006000 031760 146120 000440
00050: 000000 017300 031460 030764 000040 006000 000000 031760
00060: 146051 000440 017300 031460 000000 030774 000040 006000
00070: 031760 146122 000000 000440 000000 000000 000000 000000
00100: SAME: TO 000200-1 .

*T RECORD 1548 (%3014, #60C)
00000: 036000 060156 016523 001764 000000 017300 031460 030764
00010: 000040 006000 000000 031460 031624 000040 006000 031760
00020: 000000 146124 000440 017300 031460 030774 000000 000040
00030: 006000 031460 014747 000040 000000 006000 031760 146156
00040: 000440 017300 000000 031460 000000 000440 017070 031460
00050: 000000 032010 000040 006000 115730 034001 000000 031342
00060: 031760 146126 000440 017300 000000 031460 030774 000040
00070: 006000 031460 000000 014747 000000 000000 000000 000000
00100: SAME: TO 000200-1

*T RECORD 1549 (%3015, #60D)
00000: 036000 060156 157456 002042 000000 000040 006000 031760
00010: 146157 000440 000000 017300 031460 000000 000440 017070
00020: 000000 031460 032021 000040 006000 031460 000000 032032
00030: 000040 006000 031760 146161 000000 000440 017340 031760
00040: 000000 001500 000000 017000 031460 031356 020040 006000
00050: 000000 031460 025763 000040 006000 031460 000000 000000
00060: 000040 007000 031760 146170 000000 000440 017300 031460
00070: 031362 150040 000000 005000 000000 000000 000000 000000
00100: SAME: TO 000200-1

*T RECORD 1550 (%3016, #60E)
00000: 036000 060156 122777 002120 000000 106011 034001 031360
00010: 031760 000377 000000 000440 017170 031460 031363 000040
```

```
00020: 000000 016160 041260 000000 000640 017170 000000 033760
00030: 146164 000440 017000 031760 000000 146146 000440 017340
00040: 101460 000000 000000 000440 017360 101760 146146 000440
00050: 000000 017340 001560 000002 000440 017360 000000 031760
00060: 146150 000440 017340 001560 000000 000003 000440 017360
00070: 101760 146150 000000 000440 000000 000000 000000 000000
00100: SAME: TO 000200-1
```

```
*T RECORD 1551 (%3017, #60F)
00000: 036000 060156 006373 002176 000000 017340 001560 000004
00010: 000440 017360 000000 031460 031446 000040 006000 033760
00020: 000000 146164 000440 017000 052625 034001 000000 031376
00030: 031760 146150 000440 017340 000000 101460 000000 000440
00040: 017360 101760 000000 146150 000440 017340 001560 000002
00050: 000000 000440 017360 031760 146152 000440 000000 017340
00060: 001560 000003 000440 017360 000000 101760 146152 000440
00070: 017340 001560 000000 000004 000000 000000 000000 000000
00100: SAME: TO 000200-1
```

```
*T RECORD 1552 (%3020, #610)
00000: 036000 060156 034061 002254 000000 000440 017360 031460
00010: 031446 000040 000000 006000 033760 146164 000440 017000
00020: 000000 031760 146152 000440 017340 101460 000000 000000
00030: 000440 017360 101760 146152 000000 000440 017340 001560
00040: 000002 000440 000000 017360 047633 034001 031414 031760
00050: 000000 146154 000440 017340 001560 000003 000000 000440
00060: 017360 101760 146154 000440 000000 017340 001560 000004
00070: 000440 017360 000000 031460 000000 000000 000000 000000
00100: SAME: TO 000200-1
```

```
*T RECORD 1553 (%3021, #611)
00000: 036000 060156 122342 002332 000000 031446 000040 006000
00010: 033760 146164 000000 000440 017000 031760 146154 000440
00020: 000000 017340 101460 000000 000440 017360 000000 101760
00030: 146154 000440 017340 001560 000000 000002 000440 017360
00040: 031760 146156 000000 000440 017340 001560 000003 000440
00050: 000000 017360 101760 146156 000440 017340 000000 001560
00060: 000004 000440 017360 150002 000000 034001 031432 031460
00070: 031446 000040 000000 006000 000000 000000 000000 000000
00100: SAME: TO 000200-1
```

```
*T RECORD 1554 (%3022, #612)
00000: 036000 060156 070132 002410 000000 033760 146164 000440
00010: 017000 031760 000000 146150 000440 017340 101460 000000
00020: 000000 000440 017360 101760 146150 000440 000000 017340
00030: 001560 000002 000440 017360 000000 031760 146156 000440
00040: 017340 001560 000000 000003 000440 017360 101760 146156
00050: 000000 000440 017340 001560 000004 000440 000000 017360
00060: 031460 031446 000040 006000 000000 031460 000000 000040
00070: 007000 033760 000000 146165 000000 000000 000000 000000
00100: SAME: TO 000200-1
```

```
*T RECORD 1555 (%3023, #613)
00000: 036000 060156 166301 002466 000000 000440 017000 031460
00010: 032214 000040 000000 006000 041560 034001 031450 031760
00020: 000000 146165 000440 017340 031760 000000 000000 000500
00030: 017000 031460 000000 014040 000000 007000 033760 146164
00040: 000440 017000 000000 031460 003145 000040 006000 031460
```

```
00050: 000000 000000 000040 007000 031760 146132 000000 000440
00060: 017030 033760 000000 000500 000000 017000 031760 146120
00070: 000440 017030 000000 033760 000000 000000 000000 000000
00100: SAME: TO 000200-1


*T RECORD 1556 (%3024, #614)
00000: 036000 060156 174434 002544 000000 000000 000501 017000
00010: 031460 030766 000000 000040 006000 031460 015112 000040
00020: 000000 006000 031760 146136 000440 017300 000000 031460
00030: 030764 000040 006000 172103 000000 034001 031466 031760
00040: 146134 000440 000000 017030 033760 000000 000500 017000
00050: 000000 031760 146120 000440 017030 033760 000000 000000
00060: 000501 017000 031460 030766 000000 000040 006000 031460
00070: 015112 000040 000000 006000 000000 000000 000000 000000
00100: SAME: TO 000200-1


*T RECORD 1557 (%3025, #615)
00000: 036000 060156 161376 002622 000000 031760 146142 000440
00010: 017300 031460 000000 030764 000040 006000 031760 146132
00020: 000000 000440 017030 033760 000000 000500 000000 017000
00030: 031760 146122 000440 017030 000000 033760 000000 000501
00040: 017000 031460 000000 030766 000040 006000 031460 015112
00050: 000000 000040 006000 032446 034001 031504 000000 031760
00060: 146140 000440 017300 031460 000000 030764 000040 006000
00070: 031760 146134 000000 000440 000000 000000 000000 000000
00100: SAME: TO 000200-1


*T RECORD 1558 (%3026, #616)
00000: 036000 060156 122332 002700 000000 017030 033760 000000
00010: 000500 017000 000000 031760 146122 000440 017030 033760
00020: 000000 000000 000501 017000 031460 030766 000000 000040
00030: 006000 031460 015112 000040 000000 006000 031760 146144
00040: 000440 017300 000000 031460 030764 000040 006000 041260
00050: 000000 000000 000440 017030 031760 146124 000000 000440
00060: 017360 031460 000001 000240 000000 017160 031760 146124
00070: 000440 017030 000000 001150 000000 000000 000000 000000
00100: SAME: TO 000200-1


*T RECORD 1559 (%3027, #617)
00000: 036000 060156 164421 002756 000000 034001 031522 033760
00010: 000000 000500 000000 017000 031760 146142 000440 017030
00020: 000000 033760 000000 000501 017000 031460 000000 030766
00030: 000040 006000 031460 015024 000000 000040 006000 031760
00040: 146124 000440 000000 017300 031460 030764 000040 006000
00050: 000000 031760 146124 000440 017030 033760 000000 000000
00060: 000500 017000 031760 146140 000000 000440 017030 033760
00070: 000000 000501 000000 017000 000000 000000 000000 000000
00100: SAME: TO 000200-1


*T RECORD 1560 (%3030, #618)
00000: 036000 060156 016367 003034 000000 031460 030766 000040
00010: 006000 031460 000000 015024 000040 006000 031760 146124
00020: 000000 000440 017300 032602 034001 031540 000000 031460
00030: 030764 000040 006000 031760 000000 146126 000440 017030
00040: 033760 000000 000000 000500 017000 031760 146136 000440
00050: 000000 017030 033760 000000 000501 017000 000000 031460
00060: 030766 000040 006000 031460 000000 015027 000040 006000
00070: 031760 146126 000000 000440 000000 000000 000000 000000
```

```
00100: SAME: TO 000200-1

*T RECORD 1561 (%3031, #619)
00000: 036000 060156 035013 003112 000000 017300 031460 030764
00010: 000040 006000 000000 031760 146126 000440 017030 033760
00020: 000000 000000 000500 017000 031760 146144 000000 000440
00030: 017030 033760 000000 000501 000000 017000 031460 030766
00040: 000040 006000 000000 046321 034001 031556 031460 015024
00050: 000000 000040 006000 031760 146126 000440 000000 017300
00060: 031460 030764 000040 006000 000000 031460 000000 000040
00070: 007000 031760 000000 146120 000000 000000 000000 000000
00100: SAME: TO 000200-1

*T RECORD 1562 (%3032, #61A)
00000: 036000 060156 004367 003170 000000 000440 017030 033760
00010: 000000 000500 000000 017000 031760 146074 000440 017030
00020: 000000 033760 000000 000501 017000 031460 000000 030766
00030: 000040 006000 031460 015024 000000 000040 006000 031760
00040: 146124 000440 000000 017300 031460 030764 000040 006000
00050: 000000 031760 146122 000440 017030 033760 000000 000000
00060: 000500 017000 017605 034001 000000 031574 031760 146076
00070: 000440 017030 000000 033760 000000 000000 000000 000000
00100: SAME: TO 000200-1

*T RECORD 1563 (%3033, #61B)
00000: 036000 060156 147744 003246 000000 000000 000501 017000
00010: 031460 030766 000000 000040 006000 031460 015024 000040
00020: 000000 006000 031760 146126 000440 017300 000000 031460
00030: 030764 000040 006000 031460 000000 000000 000040 007000
00040: 031760 146120 000000 000440 017030 033760 000000 000500
00050: 000000 017000 031760 146112 000440 017030 000000 033760
00060: 000000 000501 017000 031460 000000 030766 000040 006000
00070: 031460 015112 000000 000040 000000 000000 000000 000000
00100: SAME: TO 000200-1

*T RECORD 1564 (%3034, #61C)
00000: 036000 060156 006304 003324 000000 006000 031760 146124
00010: 000440 017300 000000 017706 034001 031612 031460 030764
00020: 000000 000040 006000 031760 146122 000440 000000 017030
00030: 033760 000000 000500 017000 000000 031760 146114 000440
00040: 017030 033760 000000 000000 000501 017000 031460 030766
00050: 000000 000040 006000 031460 015112 000040 000000 006000
00060: 031760 146126 000440 017300 000000 031460 030764 000040
00070: 006000 031460 000000 000000 000000 000000 000000 000000
00100: SAME: TO 000200-1

*T RECORD 1565 (%3035, #61D)
00000: 036000 060156 110726 003402 000000 000040 007000 031760
00010: 146100 000440 000000 017300 031460 030774 000040 006000
00020: 000000 031760 146074 000440 017300 031460 000000 030764
00030: 000040 006000 051143 034001 000000 031630 031760 146102
00040: 000440 017300 000000 031460 030774 000040 006000 031760
00050: 000000 146076 000440 017300 031460 030764 000000 000040
00060: 006000 031460 031562 000040 000000 006000 031460 031654
00070: 000040 006000 000000 031460 000000 000000 000000 000000
00100: SAME: TO 000200-1

*T RECORD 1566 (%3036, #61E)
```

```
00000: 036000 060156 064575 003460 000000 031456 000040 006000
00010: 031460 031654 000000 000040 006000 031460 031603 000040
00020: 000000 006000 031460 031654 000040 006000 000000 031760
00030: 146104 000440 017300 031460 000000 030774 000040 006000
00040: 031760 146074 000000 000440 017300 031460 030764 000040
00050: 000000 006000 024777 034001 031646 031760 000000 146106
00060: 000440 017300 031460 030774 000000 000040 006000 031760
00070: 146076 000440 000000 017300 000000 000000 000000 000000
00100: SAME: TO 000200-1


*T RECORD 1567 (%3037, #61F)
00000: 036000 060156 055347 003536 000000 031460 030764 000040
00010: 006000 031460 000000 031562 000040 006000 031460 000000
00020: 000000 000040 007000 031760 146124 000440 000000 017300
00030: 031460 030774 000040 006000 000000 031760 146120 000440
00040: 017300 031460 000000 030764 000040 006000 031760 146126
00050: 000000 000440 017300 031460 030774 000040 000000 006000
00060: 031760 146122 000440 017300 000000 031460 030764 000040
00070: 006000 050030 000000 034001 000000 000000 000000 000000
00100: SAME: TO 000200-1


*T RECORD 1568 (%3040, #620)
00000: 036000 060156 127555 003614 000000 031664 031460 000000
00010: 000040 007000 000000 031760 146162 000440 017300 033460
00020: 000000 000000 000452 017070 001572 000022 000000 000440
00030: 017340 033760 014744 000500 000000 006000 031760 146033
00040: 000440 017300 000000 031460 030764 000040 006000 031760
00050: 000000 146047 000440 017300 031460 030764 000000 000040
00060: 006000 001572 000023 000440 000000 017340 033760 014744
00070: 000500 006000 000000 031760 000000 000000 000000 000000
00100: SAME: TO 000200-1


*T RECORD 1569 (%3041, #621)
00000: 036000 060156 057252 003672 000000 146120 000440 017300
00010: 031460 030764 000000 000040 006000 031760 146120 000440
00020: 000000 017030 142137 034001 031702 033760 000000 000000
00030: 000500 017000 031760 146033 000000 000440 017030 033760
00040: 000000 000501 000000 017000 031460 030766 000040 006000
00050: 000000 031460 015024 000040 006000 031760 000000 146037
00060: 000440 017300 031460 030764 000000 000040 006000 031760
00070: 146043 000440 000000 017300 000000 000000 000000 000000
00100: SAME: TO 000200-1


*T RECORD 1570 (%3042, #622)
00000: 036000 060156 150202 003750 000000 031460 030764 000040
00010: 006000 031460 000000 000000 000040 007000 031760 146163
00020: 000000 000440 017300 033460 000000 000452 000000 017070
00030: 001572 000022 000440 017340 000000 033760 014744 000500
00040: 006000 024477 000000 034001 031720 031760 146035 000440
00050: 000000 017300 031460 030764 000040 006000 000000 031760
00060: 146041 000440 017300 031460 000000 030764 000040 006000
00070: 001572 000023 000000 000440 000000 000000 000000 000000
00100: SAME: TO 000200-1


*T RECORD 1571 (%3043, #623)
00000: 036000 060156 041257 004026 000000 017340 033760 014744
00010: 000500 006000 000000 031760 146122 000440 017300 031460
00020: 000000 030764 000040 006000 031760 146122 000000 000440
```

345

```
00030: 017030 033760 000000 000500 000000 017000 031760 146041
00040: 000440 017030 000000 033760 000000 000501 017000 031460
00050: 000000 030766 000040 006000 031460 015024 000000 000040
00060: 006000 021013 034001 031736 000000 031760 146045 000440
00070: 017300 031460 000000 030764 000000 000000 000000 000000
00100: SAME: TO 000200-1


*T RECORD 1572 (%3044, #624)
00000: 036000 060156 121635 004104 000000 000040 006000 031760
00010: 146051 000440 000000 017300 031460 030764 000040 006000
00020: 000000 033472 000000 000440 007000 001560 000000 000030
00030: 000440 017340 033760 000000 000000 000500 017140 033760
00040: 014275 000501 000000 006000 031760 146112 000440 017300
00050: 000000 031460 030764 000040 006000 031460 000000 000000
00060: 000440 017170 031461 000000 000000 000440 007170 033760
00070: 000000 000517 000000 017000 000000 000000 000000 000000
00100: SAME: TO 000200-1


*T RECORD 1573 (%3045, #625)
00000: 036000 060156 104262 004162 000000 001577 000022 000440
00010: 017340 013563 000000 034001 031754 033760 014744 000500
00020: 000000 006000 031760 146061 000440 017300 000000 031460
00030: 030764 000040 006000 031760 000000 146061 000440 017030
00040: 033760 000000 000000 000500 017000 001575 146053 000440
00050: 000000 017030 033760 000000 000501 017000 000000 031460
00060: 030766 000040 006000 031460 000000 015027 000040 006000
00070: 031760 146061 000000 000440 000000 000000 000000 000000
00100: SAME: TO 000200-1


*T RECORD 1574 (%3046, #626)
00000: 036000 060156 073615 004240 000000 017300 031460 030764
00010: 000040 006000 000000 031760 146061 000440 017030 033760
00020: 000000 000000 000500 017000 001575 146112 000000 000440
00030: 017030 121131 034001 031772 000000 033760 000000 000501
00040: 017000 031460 000000 030766 000040 006000 031460 015112
00050: 000000 000040 006000 031760 146061 000440 000000 017300
00060: 031460 030764 000040 006000 000000 031760 146061 000440
00070: 017030 033760 000000 000000 000000 000000 000000 000000
00100: SAME: TO 000200-1


*T RECORD 1575 (%3047, #627)
00000: 036000 060156 056451 004316 000000 000500 017000 001575
00010: 146053 000440 000000 017030 033760 000000 000501 017000
00020: 000000 031460 030766 000040 006000 031460 000000 015024
00030: 000040 006000 031460 014747 000000 000040 006000 001577
00040: 000013 000440 000000 017340 031460 000000 000040 007000
00050: 000000 026245 034001 032010 033760 000000 000000 000500
00060: 017000 031760 146063 000440 000000 017340 121560 000000
00070: 000500 017000 000000 031460 000000 000000 000000 000000
00100: SAME: TO 000200-1


*T RECORD 1576 (%3050, #628)
00000: 036000 060156 110544 004374 000000 032015 040040 005000
00010: 031460 000000 000000 000440 017070 031760 146064 000440
00020: 000000 017340 121560 000000 000500 017000 000000 031460
00030: 000000 114040 007000 031460 000000 000000 000440 007070
00040: 033760 000000 000000 000500 017000 031760 146065 000440
00050: 000000 017340 121560 000000 000500 017000 000000 031460
```

```
00060: 032026 040040 005000 031460 000000 000000 000440 017070
00070: 127217 034001 000000 032026 000000 000000 000000 000000
00100: SAME: TO 000200-1


*T RECORD 1577 (%3051, #629)
00000: 036000 060156 064320 004452 000000 031760 146066 000440
00010: 017340 121560 000000 000000 000500 017000 031460 000000
00020: 000000 114040 007000 031460 000000 000440 000000 007070
00030: 031760 146161 000440 017300 000000 041260 000000 000440
00040: 017070 031760 000000 146063 000440 017340 033760 000000
00050: 000000 000500 017140 033760 000000 000501 000000 017140
00060: 033760 000000 000502 017140 000000 033760 000000 000503
00070: 017000 031760 000000 146110 000000 000000 000000 000000
00100: SAME: TO 000200-1


*T RECORD 1578 (%3052, #62A)
00000: 036000 060156 160044 004530 000000 000440 017340 111560
00010: 000000 000500 000000 017000 031461 032051 140440 006000
00020: 000000 035170 034001 032044 031460 032051 000000 014040
00030: 006000 031760 146111 000440 000000 017340 111562 000000
00040: 000500 017000 000000 031463 032056 140440 005000 032056
00050: 000000 032064 114040 001000 031760 146067 000000 000440
00060: 017340 030760 000000 000500 000000 017000 031760 146071
00070: 000440 017340 000000 121660 000000 000000 000000 000000
00100: SAME: TO 000200-1


*T RECORD 1579 (%3053, #62B)
00000: 036000 060156 013333 004606 000000 000000 000500 017070
00010: 031460 032062 000000 000040 016000 031760 146070 000440
00020: 000000 017340 030760 000000 000500 017000 000000 031760
00030: 146072 000440 017340 121660 000000 000000 000500 017070
00040: 172137 034001 000000 032062 031760 146161 000440 017300
00050: 000000 031760 177777 000440 017070 031460 000000 000000
00060: 000040 007000 031461 000000 000000 000440 017030 031460
00070: 000000 000100 000000 015000 000000 000000 000000 000000
00100: SAME: TO 000200-1


*T RECORD 1580 (%3054, #62C)
00000: 036000 060156 010062 004664 000000 033760 000550 000441
00010: 017000 031462 000000 000000 000440 017000 031460 032074
00020: 000000 014040 005000 113161 000000 000442 000000 017000
00030: 031460 032072 114040 005000 000000 003161 000000 000442
00040: 017000 031460 000000 032074 014040 005000 031460 000000
00050: 000000 000040 011000 033760 000000 000501 000000 007000
00060: 133767 034001 032100 031760 000000 144644 000440 017340
00070: 031760 000000 000000 000500 000000 000000 000000 000000
00100: SAME: TO 000200-1


*T RECORD 1581 (%3055, #62D)
00000: 036000 060156 165450 004742 000000 017000 031460 032125
00010: 020040 006000 000000 031760 146160 000440 017340 031760
00020: 000000 000000 000500 017000 041260 000000 000000 020440
00030: 007070 031760 101376 000440 000000 017360 031460 031014
00040: 000040 006000 000000 031760 146161 000440 017300 101760
00050: 000000 000000 000440 017070 031760 146163 000000 000440
00060: 017340 033760 000000 000500 000000 017000 001560 000045
00070: 000440 017300 000000 041260 000000 000000 000000 000000
00100: SAME: TO 000200-1
```

```
*T RECORD 1582 (%3056, #62E)
00000: 036000 060156 150136 005020 000000 000000 000440 017070
00010: 023464 034001 000000 032116 031760 101416 000440 017340
00020: 000000 033760 000000 000500 017000 031760 000000 062524
00030: 000440 017030 001560 074402 000000 000440 017360 031760
00040: 000124 000440 000000 017030 001560 074476 000440 017360
00050: 000000 031460 000000 000040 007000 031760 000000 000145
00060: 000440 017340 033760 010000 000000 000441 017000 031561
00070: 000000 000500 000000 007070 000000 000000 000000 000000
00100: SAME: TO 000200-1

*T RECORD 1583 (%3057, #62F)
00000: 036000 060156 145436 005076 000000 031760 146203 000440
00010: 017340 033760 000000 146204 000442 017000 031760 000000
00020: 000000 000500 017000 031460 032135 020040 000000 005000
00030: 010071 034001 032134 003562 000000 000003 000442 017000
00040: 033760 134204 000000 005441 017000 031460 032150 000040
00050: 000000 006000 033760 134327 005441 017000 000000 031460
00060: 032150 000040 006000 033760 000000 134251 001441 017000
00070: 031460 032150 000000 000040 000000 000000 000000 000000
00100: SAME: TO 000200-1

*T RECORD 1584 (%3060, #630)
00000: 036000 060156 136603 005154 000000 006000 033760 134374
00010: 001441 017000 000000 031460 032150 000040 006000 031460
00020: 000000 031014 000040 006000 031760 146203 000000 000440
00030: 017300 041260 000000 000440 000000 007070 103462 000000
00040: 000442 017340 000000 001561 000040 000440 017360 027643
00050: 000000 022001 032152 003561 000041 000441 000000 017000
00060: 001700 146150 000440 017340 000000 101461 000000 000440
00070: 017360 001700 000000 146156 000000 000000 000000 000000
00100: SAME: TO 000200-1

*T RECORD 1585 (%3061, #631)
00000: 020000 060127 037341 005232 000000 000440 017340 001561
00010: 000002 000440 000000 017360 001700 146154 000440 017340
00020: 000000 001561 000003 000440 017360 001700 000000 146152
00030: 000440 017340 031461 000000 000000 000440 007360 044522
00040: 000000 000000 000000 000000 000000 000000 000000 000000
00050: SAME: TO 000200-1

*T RECORD 1586 (%3062, #632)
00000: 002000 120000 120000 000000 000000 000000 000000 000000
00010: SAME: TO 000200-1

*T RECORD 1587 (%3063, #633)
00000: 025000 020000 011362 077103 046111 050040 001053 000000
00010: SAME: TO 000020-1
00020: 000000 020040 041514 044520 050111 047107 020122 047525
00030: 052111 047105 020040 020040 020074 034065 030063 031066
00040: 027060 034462 032476 020040 020040 020040 020040 020040
00050: 020040 020040 000000 000000 000000 000000 000000 000000
00060: SAME: TO 000200-1

*T RECORD 1588 (%3064, #634)
00000: 003400 040001 055215 077103 046111 050000 000000 000000
00010: SAME: TO 000200-1
```

348

```
*T RECORD 1589 (%3065, #635)
00000: 036000 060156 113241 000000 000000 001052 034001 032163
00010: 043260 000000 000000 000457 017000 121160 000000 000442
00020: 000000 017000 121160 032167 114443 005000 000000 103177
00030: 032171 000457 016000 031460 000000 032171 040040 005000
00040: 033577 000002 000000 000457 017000 121161 000000 000445
00050: 000000 017000 121161 032175 114444 005000 000000 030760
00060: 000004 000440 017000 033077 000000 000000 000457 007000
00070: 031460 000000 000000 040040 000000 000000 000000 000000
00100: SAME: TO 000200-1

*T RECORD 1590 (%3066, #636)
00000: 036000 060156 155421 000056 000000 007000 030760 000010
00010: 000440 017000 000000 033077 000000 000457 007000 031760
00020: 000000 146214 000440 017340 140412 034001 000000 032201
00030: 033760 000000 000500 017140 000000 033760 000000 000442
00040: 017000 033760 000000 001000 000443 017000 033760 000600
00050: 000000 000444 017000 033760 000000 000445 000000 017000
00060: 033760 032163 000501 006000 000000 033477 000000 000450
00070: 017000 031760 000000 146216 000000 000000 000000 000000
00100: SAME: TO 000200-1

*T RECORD 1591 (%3067, #637)
00000: 036000 060156 037547 000134 000000 000440 017340 033760
00010: 000000 000500 000000 017140 033760 032163 000501 006000
00020: 000000 033477 000000 000451 007000 031460 000000 000000
00030: 000440 017340 031460 000000 000000 000120 015000 033760
00040: 000000 000500 000000 017140 166104 034001 032217 033760
00050: 000000 000000 000501 017140 033760 000000 000000 000502
00060: 017140 031760 146217 000440 000000 017360 031462 000000
00070: 000440 017270 000000 031461 000000 000000 000000 000000
00100: SAME: TO 000200-1

*T RECORD 1592 (%3070, #638)
00000: 036000 060156 121176 000212 000000 000000 000440 017270
00010: 031460 000000 000000 000440 017270 031460 032200 000040
00020: 000000 006000 031170 000000 000451 017000 000000 041170
00030: 032330 020451 005000 031470 000000 032326 120440 005000
00040: 032233 032307 000000 020040 002000 031460 032225 000040
00050: 000000 016000 041570 000001 000440 017000 000000 031460
00060: 032241 120040 005000 177145 000000 034001 032235 041570
00070: 000002 000440 000000 017000 000000 000000 000000 000000
00100: SAME: TO 000200-1

*T RECORD 1593 (%3071, #639)
00000: 036000 060156 171202 000270 000000 031460 032262 120040
00010: 005000 041570 000000 000004 000440 017000 032305 032264
00020: 000000 120040 001000 033760 000000 000452 000000 017700
00030: 031760 146217 000440 017340 000000 030760 000000 000500
00040: 017000 031760 000000 146215 000440 017340 033760 000000
00050: 000000 000513 017000 113660 000000 000516 000000 017000
00060: 031760 146214 000440 017340 000000 030760 000000 000500
00070: 017000 123072 000000 000000 000000 000000 000000 000000
00100: SAME: TO 000200-1

*T RECORD 1594 (%3072, #63A)
00000: 036000 060156 021200 000346 000000 000455 017000 031760
```

```
00010: 146216 000440 000000 017340 064076 034001 032253 031460
00020: 000000 000000 000140 015000 123660 032341 000000 000514
00030: 006000 031460 000000 000440 000000 011030 031760 146215
00040: 000440 017360 000000 031760 000000 000400 017030 031760
00050: 000000 146214 000440 017360 031460 032225 000000 000040
00060: 016000 033760 001000 000452 000000 017700 031460 032242
00070: 000040 016000 000000 033760 000000 000000 000000 000000
00100: SAME: TO 000200-1


*T RECORD 1595 (%3073, #63B)
00000: 036000 060156 020075 000424 000000 000000 000452 017700
00010: 031760 146216 000000 000440 017340 030760 000000 000500
00020: 000000 017000 031760 146214 000440 017340 000000 033760
00030: 000000 000513 017000 165621 000000 034001 032271 113660
00040: 000000 000516 000000 017000 031760 146215 000440 017340
00050: 000000 030760 000000 000500 017000 123072 000000 000000
00060: 000455 017000 031760 146217 000000 000440 017340 031460
00070: 000000 000140 000000 015000 000000 000000 000000 000000
00100: SAME: TO 000200-1


*T RECORD 1596 (%3074, #63C)
00000: 036000 060156 017760 000502 000000 123660 032341 000514
00010: 006000 031460 000000 000000 000440 011030 031760 146214
00020: 000000 000440 017360 031760 000000 000400 000000 017030
00030: 031760 146215 000440 017360 000000 031460 032225 000040
00040: 016000 033760 000000 000600 000452 017700 031460 032265
00050: 000000 000040 016000 133604 034001 032307 000000 031760
00060: 146214 000440 017340 030760 000000 000000 000500 017000
00070: 031760 146216 000000 000440 000000 000000 000000 000000
00100: SAME: TO 000200-1


*T RECORD 1597 (%3075, #63D)
00000: 036000 060156 156361 000560 000000 017340 033760 000000
00010: 000517 017000 000000 031260 000000 000440 017070 031760
00020: 000000 146214 000440 017300 031477 000000 000000 000440
00030: 017070 031760 146215 000440 000000 017340 030760 000000
00040: 000500 017000 000000 031760 146217 000440 017340 033760
00050: 000000 000000 000517 017000 031260 000000 000000 000440
00060: 017070 031760 146215 000440 000000 017300 031477 000000
00070: 000440 017070 000000 110622 000000 000000 000000 000000
00100: SAME: TO 000200-1


*T RECORD 1598 (%3076, #63E)
00000: 036000 060156 137634 000636 000000 034001 032325 031460
00010: 000000 000040 000000 007000 031760 146214 000440 017300
00020: 000000 031760 177777 000440 017070 031760 000000 146214
00030: 000440 017340 033760 000000 000000 000500 017140 033760
00040: 000000 000501 000000 017140 033760 000000 000502 011140
00050: 000000 033760 000000 000411 017000 001571 000000 000003
00060: 000440 017360 031462 000000 000000 000440 017270 031461
00070: 000000 000440 000000 017270 000000 000000 000000 000000
00100: SAME: TO 000200-1


*T RECORD 1599 (%3077, #63F)
00000: 036000 060156 110332 000714 000000 031460 000000 000440
00010: 007270 033476 000000 014744 000440 006000 033460 000000
00020: 000000 000452 017000 016463 034001 032343 000000 033461
00030: 000000 000451 017000 033475 000000 014744 000440 006000
```

350

```
00040: 033472 000000 000000 000442 017000 033471 015112 000443
00050: 000000 006000 033460 000000 000452 017000 000000 033461
00060: 000000 000451 017000 033474 000000 014744 000440 006000
00070: 033461 000000 000000 000443 000000 000000 000000 000000
00100: SAME: TO 000200-1
```

*T RECORD 1600 (%3100, #640)
```
00000: 036000 060156 102635 000772 000000 017000 033460 000000
00010: 000442 017000 000000 033472 000000 000440 017000 033471
00020: 000000 000000 000441 017000 033473 015140 000000 000456
00030: 006000 033460 000000 000452 000000 017000 033461 000000
00040: 000451 017000 000000 007113 012001 032361 033476 014744
00050: 000000 000440 006000 033472 000000 000442 000000 017000
00060: 033471 015024 000443 006000 000000 031460 014747 000040
00070: 006000 031460 000000 000000 000000 000000 000000 000000
00100: SAME: TO 000200-1
```

*T RECORD 1601 (%3101, #641)
```
00000: 004000 060103 051421 001050 000000 000040 007000 161206
00010: 000000 000000 000000 000000 000000 000000 000000 000000
00020: SAME: TO 000200-1
```

*T RECORD 1602 (%3102, #642)
```
00000: 002000 120000 120000 000000 000000 000000 000000 000000
00010: SAME: TO 000200-1
```

*T RECORD 1603 (%3103, #643)
```
00000: 025000 020000 160061 077116 045520 042040 002132 000000
00010: SAME: TO 000020-1
00020: 000000 020116 052515 042522 044503 020113 050104 027040
00030: 044517 047111 020074 034071 030065 031071 027061 030460
00040: 034076 020040 020040 020040 020040 020040 020040 020040
00050: 020040 020040 000000 000000 000000 000000 000000 000000
00060: SAME: TO 000200-1
```

*T RECORD 1604 (%3104, #644)
```
00000: 003400 040001 046637 077116 045520 042000 000000 000000
00010: SAME: TO 000200-1
```

*T RECORD 1605 (%3105, #645)
```
00000: 036000 060156 105126 000000 000000 002131 034001 032366
00010: 031760 146224 000000 000440 017340 037760 000000 000501
00020: 000000 017002 003161 000000 000440 017000 000000 001560
00030: 146251 000440 017340 033760 000000 000000 000500 007000
00040: 033760 000055 000000 000440 017000 031460 032716 000040
00050: 000000 006000 031760 146231 000440 017340 000000 031760
00060: 000000 000500 017000 031460 000000 032623 120040 005000
00070: 103760 000000 000000 000440 000000 000000 000000 000000
00100: SAME: TO 000200-1
```

*T RECORD 1606 (%3106, #646)
```
00000: 036000 060156 001776 000056 000000 017070 031760 146232
00010: 000440 017360 000000 031460 032366 000040 006000 031460
00020: 000000 003504 001040 006000 164472 034001 000000 032404
00030: 031460 000000 000040 007000 000000 031760 146224 000440
00040: 017340 031760 000000 000000 000500 017000 031460 032427
00050: 000000 020040 005000 031760 146225 000440 000000 017340
00060: 031760 000000 000500 017000 000000 031460 032427 120040
```

```
00070: 005000 101760 000000 000000 000000 000000 000000 000000
00100: SAME: TO 000200-1


*T RECORD 1607 (%3107, #647)
00000: 036000 060156 076002 000134 000000 000500 017070 033760
00010: 000056 000440 000000 017000 031460 032716 000040 006000
00020: 000000 031760 146226 000440 017340 033760 000000 014744
00030: 000500 006000 031760 146226 000000 000440 017300 031460
00040: 000000 000440 000000 017070 062327 034001 032422 031461
00050: 000000 000000 000440 017170 031760 146230 000000 000440
00060: 017300 031760 000000 000440 000000 017070 031760 146231
00070: 000440 017340 000000 101760 000000 000000 000000 000000
00100: SAME: TO 000200-1


*T RECORD 1608 (%3110, #648)
00000: 036000 060156 030633 000212 000000 000000 000500 007070
00010: 031460 032646 000000 000040 006000 031460 000000 000040
00020: 000000 007000 031760 146231 000440 017340 000000 021760
00030: 000000 000500 017070 031460 000000 032507 020040 005000
00040: 031760 146230 000000 000440 017340 023760 000000 000516
00050: 000000 017070 031760 146225 000440 017340 000000 031760
00060: 000000 000500 017000 033775 000000 034001 032440 031476
00070: 032456 020440 000000 005000 000000 000000 000000 000000
00100: SAME: TO 000200-1


*T RECORD 1609 (%3111, #649)
00000: 036000 060156 124464 000270 000000 031460 032453 114040
00010: 005000 031760 000000 146226 000440 017340 033760 000000
00020: 000000 000500 017140 033760 014747 000501 000000 006000
00030: 031460 000000 000440 017030 000000 031760 146226 000040
00040: 017360 031760 000000 146231 000040 017340 021740 000000
00050: 000000 114500 017030 031760 146230 000440 000000 017360
00060: 031460 032512 000040 016000 000000 031760 146224 000440
00070: 017340 031760 000000 000000 000000 000000 000000 000000
00100: SAME: TO 000200-1


*T RECORD 1610 (%3112, #64A)
00000: 036000 060156 041546 000346 000000 000500 017000 031460
00010: 032465 120040 000000 005000 041177 034001 032456 033760
00020: 000000 000012 000441 017000 031760 146226 000000 000440
00030: 017340 030760 000000 000500 000000 017000 023740 000000
00040: 114440 017000 000000 031460 003325 000040 006000 031760
00050: 000000 146226 000440 017300 031461 032512 000000 000440
00060: 016070 037476 000000 000456 000000 017002 001576 133524
00070: 000440 017340 000000 031460 000000 000000 000000 000000
00100: SAME: TO 000200-1


*T RECORD 1611 (%3113, #64B)
00000: 036000 060156 066073 000424 000000 000000 000100 015000
00010: 033760 000000 000000 000502 017140 031460 000000 000100
00020: 000000 015000 033760 000000 000503 017000 000000 031760
00030: 146226 000440 017340 066310 000000 034001 032474 033760
00040: 000000 000500 000000 017140 033760 015112 000501 006000
00050: 000000 031460 014747 000040 006000 031460 000000 014744
00060: 000040 006000 031460 000000 000000 000040 011000 033760
00070: 000000 000403 000000 011000 000000 000000 000000 000000
00100: SAME: TO 000200-1
```

352

```
*T RECORD 1612 (%3114, #64C)
00000: 036000 060156 057240 000502 000000 033760 015140 000402
00010: 006000 031760 000000 146226 000440 017300 031460 000000
00020: 000000 000440 017070 031461 000000 000440 000000 017170
00030: 031460 032512 000040 016000 000000 031460 032741 000040
00040: 006000 043260 000000 032366 000440 006000 031460 003504
00050: 000000 001040 006000 017443 034001 032512 000000 031760
00060: 146231 000440 017340 033760 000000 000000 000503 017000
00070: 003563 000002 000000 000443 000000 000000 000000 000000
00100: SAME: TO 000200-1

*T RECORD 1613 (%3115, #64D)
00000: 036000 060156 007516 000560 000000 017000 035463 000000
00010: 000443 017002 000000 031760 146241 000440 017340 031760
00020: 000000 000000 002500 017034 033760 000000 000000 000502
00030: 017000 043562 000377 000441 000000 017000 013463 000000
00040: 000443 017000 000000 031460 032531 040040 005240 031760
00050: 000000 000000 002500 017034 033760 000000 000000 000502
00060: 017000 041562 177400 000440 000000 017030 031561 000000
00070: 000500 017170 000000 130607 000000 000000 000000 000000
00100: SAME: TO 000200-1

*T RECORD 1614 (%3116, #64E)
00000: 036000 060156 144455 000636 000000 034001 032530 031460
00010: 032521 000040 000000 016200 031561 020000 000440 017170
00020: 000000 031760 100012 000440 017030 031760 000000 146255
00030: 000440 017360 033760 130144 000000 000440 017000 031460
00040: 001427 000040 000000 006000 031460 000000 000040 007000
00050: 000000 033760 000040 000440 017000 031460 000000 032716
00060: 000040 006000 031460 032646 000000 000040 006000 031460
00070: 000000 000040 000000 007000 000000 000000 000000 000000
00100: SAME: TO 000200-1

*T RECORD 1615 (%3117, #64F)
00000: 036000 060156 006552 000714 000000 041660 001700 001440
00010: 017036 033760 000000 032554 000500 006000 031760 146231
00020: 000000 000440 017340 031363 034001 032546 000000 031760
00030: 000000 000500 017000 101760 000000 032553 120500 005070
00040: 103760 000000 000000 000440 017000 031460 032366 000040
00050: 000000 006000 031460 003504 001040 006000 000000 031460
00060: 000000 000040 007000 031760 000000 146230 000440 017340
00070: 103760 000000 000000 000516 000000 000000 000000 000000
00100: SAME: TO 000200-1

*T RECORD 1616 (%3120, #650)
00000: 036000 060156 054316 000772 000000 017070 033460 000000
00010: 000452 017000 000000 031760 146232 000440 017340 031760
00020: 000000 000000 000500 017000 031460 032563 000000 020040
00030: 005000 123472 000000 000452 000000 017000 003560 000060
00040: 000440 017000 000000 122234 034001 032564 031460 032716
00050: 000000 000040 006000 031760 146224 000440 000000 017340
00060: 031760 000000 000500 017000 000000 031460 032573 020040
00070: 005000 031760 000000 146225 000000 000000 000000 000000
00100: SAME: TO 000200-1

*T RECORD 1617 (%3121, #651)
00000: 036000 060156 033347 001050 000000 000440 017340 031760
00010: 000000 000500 000000 017000 031460 032607 120040 005000
```

```
00020: 000000 031760 146226 000440 017340 030760 000000 000012
00030: 000440 017000 033760 003435 000000 000500 006000 031461
00040: 000000 000440 000000 017000 101461 032601 020440 005000
00050: 000000 031460 032623 120040 005000 031260 000000 000000
00060: 000440 017000 110140 034001 000000 032602 061660 032604
00070: 020500 005000 000000 031460 000000 000000 000000 000000
00100: SAME: TO 000200-1

*T RECORD 1618 (%3122, #652)
00000: 036000 060156 135116 001126 000000 032623 014040 005000
00010: 001072 000000 000000 000440 017030 031460 032623 010040
00020: 000000 005000 031460 000000 000040 007060 000000 033472
00030: 014744 000440 006000 037476 000000 000000 000456 017002
00040: 001576 133524 000000 000440 017340 033760 000000 000502
00050: 000000 017140 033760 015140 000503 006000 000000 031760
00060: 146226 000440 017340 033760 000000 000000 000502 017140
00070: 033760 015024 000000 000503 000000 000000 000000 000000
00100: SAME: TO 000200-1

*T RECORD 1619 (%3123, #653)
00000: 036000 060156 067057 001204 000000 006000 031460 032623
00010: 050040 005000 000000 051623 034001 032620 031760 146226
00020: 000000 000440 017300 031460 000000 000440 000000 017070
00030: 031461 000000 000440 007170 000000 033760 000077 000440
00040: 017000 031460 000000 032716 000040 006000 033760 000040
00050: 000000 000440 017000 031460 032716 000040 000000 006000
00060: 031760 146233 000440 017300 000000 101760 000000 000440
00070: 017070 031460 000000 032741 000000 000000 000000 000000
00100: SAME: TO 000200-1

*T RECORD 1620 (%3124, #654)
00000: 036000 060156 124112 001262 000000 000040 016000 031760
00010: 146250 000440 000000 017360 033760 020040 000440 017030
00020: 000000 021760 146235 000440 017300 023760 000000 000005
00030: 000441 017000 136131 034001 000000 032636 013461 000000
00040: 000441 017160 000000 031460 032636 120040 005000 031460
00050: 000000 000000 000420 015170 031460 032741 000000 000040
00060: 006000 043260 032366 000440 000000 006000 031460 000000
00070: 000040 011000 000000 031760 000000 000000 000000 000000
00100: SAME: TO 000200-1

*T RECORD 1621 (%3125, #655)
00000: 036000 060156 021271 001340 000000 003504 003400 006010
00010: 031460 000000 000000 000040 007000 031760 146231 000440
00020: 000000 017340 031760 000000 000500 017000 000000 031460
00030: 032656 022040 005000 031760 000000 146233 000440 017340
00040: 031760 000000 000000 000500 017000 031760 146226 122440
00050: 000000 017340 161721 034001 032654 033760 000000 000000
00060: 000500 017140 033760 000000 000000 000501 017000 031760
00070: 146250 000440 000000 017340 000000 000000 000000 000000
00100: SAME: TO 000200-1

*T RECORD 1622 (%3126, #656)
00000: 036000 060156 061536 001416 000000 031760 000000 000500
00010: 017340 033760 000000 000000 000502 011000 031460 000000
00020: 000000 000100 015000 031460 000000 000000 000000 015000
00030: 033760 032712 054523 005000 000000 031760 146224 000440
00040: 017340 033760 000000 000000 000504 017000 031460 032671
```

```
00050: 000000 020040 005000 001563 000003 000440 000000 017340
00060: 031460 032705 000040 016000 000000 101463 000000 000440
00070: 017340 063163 000000 034001 000000 000000 000000 000000
00100: SAME: TO 000200-1


*T RECORD 1623 (%3127, #657)
00000: 036000 060156 055574 001474 000000 032672 031460 000000
00010: 000440 017000 000000 031460 032701 140040 005000 043260
00020: 000000 003516 000457 006000 031460 032712 000000 054040
00030: 005000 103760 000000 000457 000000 017000 031460 003516
00040: 000040 006140 000000 032705 032712 054040 002140 111560
00050: 000000 000000 000500 017140 031460 032712 000000 016040
00060: 005000 111560 000000 000500 000000 017140 031460 032712
00070: 142040 005000 000000 031760 000000 000000 000000 000000
00100: SAME: TO 000200-1


*T RECORD 1624 (%3130, #658)
00000: 036000 060156 116044 001552 000000 000000 000500 017300
00010: 031460 000000 000000 000440 017070 031464 000000 000440
00020: 000000 017000 136256 034001 032710 031460 000000 032712
00030: 020040 005000 031461 000000 000000 000440 017170 031462
00040: 000000 000440 000000 017000 031460 001516 120040 006000
00050: 000000 031460 032741 000040 006000 031460 000000 000000
00060: 000040 007000 033760 000005 000000 000443 017000 031760
00070: 146235 000440 000000 017340 000000 000000 000000 000000
00100: SAME: TO 000200-1


*T RECORD 1625 (%3131, #659)
00000: 036000 060156 136724 001630 000000 031760 000000 002500
00010: 017034 033760 000000 000000 000502 017000 043562 177400
00020: 000000 000441 017000 013463 000000 000443 000000 017000
00030: 031460 032733 040040 005000 000000 031460 000000 000040
00040: 017140 147003 000000 034001 032726 031760 000000 002500
00050: 000000 017034 033760 000000 000502 017000 000000 041562
00060: 000377 000440 017030 031561 000000 000000 000500 017270
00070: 031460 032722 000000 000040 000000 000000 000000 000000
00100: SAME: TO 000200-1


*T RECORD 1626 (%3132, #65A)
00000: 036000 060156 013146 001706 000000 016100 031161 000000
00010: 000440 017070 000000 031760 146255 000440 017300 031460
00020: 000000 000000 000440 017070 033760 130144 000000 000440
00030: 017000 031460 001427 000040 000000 006000 031460 000000
00040: 000040 007000 000000 041260 000000 000440 017030 031760
00050: 000000 146231 000440 017360 031760 146232 000000 000440
00060: 017360 011734 034001 032744 000000 031760 146230 000440
00070: 017360 031760 000000 146225 000000 000000 000000 000000
00100: SAME: TO 000200-1


*T RECORD 1627 (%3133, #65B)
00000: 036000 060156 110634 001764 000000 000440 017360 031760
00010: 146233 000440 000000 017360 031760 146226 000440 017360
00020: 000000 031460 000000 000040 007160 031760 000000 101420
00030: 001440 017300 041260 000000 000000 000440 017070 031460
00040: 000000 000040 000000 017160 031760 146220 000440 017030
00050: 000000 031460 032632 000040 006000 031460 000000 000000
00060: 000040 007000 033760 130013 000000 000440 017000 031760
00070: 146224 000440 000000 017340 000000 000000 000000 000000
```

```
00100: SAME: TO 000200-1

*T RECORD 1628 (%3134, #65C)
00000: 036000 060156 132452 002042 000000 031760 000000 000500
00010: 017000 153553 000000 010001 032762 031460 032764 020040
00020: 000000 005000 033760 130100 000440 017000 000000 031460
00030: 001427 000040 006000 031460 000000 000000 000040 007000
00040: 052075 006400 000000 146220 032757 000000 077777 101420
00050: 000000 000001 000000 000000 000000 000000 000000 000000
00060: 000000 000000 000001 002620 000000 003000 146242 100004
00070: 000500 000564 000000 000012 000000 000000 000000 000000
00100: SAME: TO 000200-1

*T RECORD 1629 (%3135, #65D)
00000: 010000 060112 165670 002120 000000 000001 146235 016002
00010: 002000 146251 000000 000060 000061 000006 000057 146477
00020: 000000 000000 000000 000000 000000 000000 000000 000000
00030: SAME: TO 000200-1

*T RECORD 1630 (%3136, #65E)
00000: 002000 120000 120000 000000 000000 000000 000000 000000
00010: SAME: TO 000200-1

*T RECORD 1631 (%3137, #65F)
00000: 025000 020000 137534 053124 044515 042440 000035 000000
00010: SAME: TO 000020-1
00020: 000000 044515 040507 042522 020103 047504 042440 046111
00030: 047113 042504 020055 020065 035064 032040 050115 020040
00040: 052125 042456 026040 031066 020040 043105 041056 026040
00050: 030471 034461 000000 000000 000000 000000 000000 000000
00060: SAME: TO 000200-1

*T RECORD 1632 (%3140, #660)
00000: 003400 040001 022242 053124 044515 042400 000000 000000
00010: SAME: TO 000200-1

*T RECORD 1633 (%3141, #661)
00000: 023400 060135 006571 000000 000000 000034 014400 146256
00010: 044515 040507 000000 042522 020106 044522 046527 040522
00020: 000000 042440 035040 020065 035064 032040 000000 050115
00030: 020040 052125 042456 026040 000000 031066 020040 043105
00040: 041056 026040 000000 030471 034461 177777 045000 000000
00050: SAME: TO 000200-1

*T RECORD 1634 (%3142, #662)
00000: 002000 120000 120000 000000 000000 000000 000000 000000
00010: SAME: TO 000200-1

*T RECORD 1635 (%3143, #663)
00000: 025000 020000 173156 077104 046523 045440 003164 000000
00010: SAME: TO 000020-1
00020: 000000 020040 045040 044516 051524 042501 042040 047506
00030: 020050 026040 042105 047123 044524 054440 046501 051513
00040: 020074 034065 030063 031066 027060 034462 032476 020040
00050: 020040 020040 000000 000000 000000 000000 000000 000000
00060: SAME: TO 000200-1

*T RECORD 1636 (%3144, #664)
```

356

```
00000: 003400 040001 053230 077104 046523 045400 000000 000000
00010: SAME: TO 000200-1

*T RECORD 1637 (%3145, #665)
00000: 036000 060156 133211 000000 000000 003163 034001 032766
00010: 031460 003577 000000 000040 006000 032775 033176 150040
00020: 000000 002000 031460 033003 000040 006000 000000 031760
00030: 146307 000440 017340 031760 000000 000000 000500 017000
00040: 033002 021412 000000 120040 002000 031460 033002 000040
00050: 000000 016000 031760 146307 000440 017340 000000 031760
00060: 000000 000500 017000 033002 000000 033444 120040 002000
00070: 031460 033022 000000 000040 000000 000000 000000 000000
00100: SAME: TO 000200-1

*T RECORD 1638 (%3146, #666)
00000: 036000 060156 164711 000056 000000 006000 031460 020702
00010: 000040 006000 000000 031460 000000 000040 007000 033760
00020: 000000 135326 000441 017000 153760 034001 000000 033004
00030: 031460 033041 000040 006000 000000 033760 146310 000440
00040: 017300 031760 000000 146516 000440 017070 031760 146522
00050: 000000 000440 017170 031460 020646 000040 000000 006000
00060: 033760 146310 000440 017300 000000 031760 146526 000440
00070: 017070 031760 000000 146532 000000 000000 000000 000000
00100: SAME: TO 000200-1

*T RECORD 1639 (%3147, #667)
00000: 036000 060156 103117 000134 000000 000440 017170 031460
00010: 020646 000040 000000 006000 033760 146536 000441 017000
00020: 000000 031460 033054 000040 006000 033760 000000 146536
00030: 000441 017000 031460 033067 000000 000040 006000 031460
00040: 000000 000040 000000 007000 127262 034001 033022 033760
00050: 000000 146536 000441 017000 031460 033041 000000 000040
00060: 006000 033760 146313 000440 000000 017300 031760 146516
00070: 000440 017070 000000 031760 000000 000000 000000 000000
00100: SAME: TO 000200-1

*T RECORD 1640 (%3150, #668)
00000: 036000 060156 120400 000212 000000 146522 000440 017170
00010: 031460 020646 000000 000040 006000 033760 146313 000440
00020: 000000 017300 031760 146526 000440 017070 000000 031760
00030: 146532 000440 017170 031460 000000 020646 000040 006000
00040: 033760 135326 000000 000441 017000 031460 033054 000040
00050: 000000 006000 033760 135326 000441 017000 000000 031460
00060: 033067 000040 006000 066325 000000 034001 033040 031460
00070: 000000 000040 000000 007000 000000 000000 000000 000000
00100: SAME: TO 000200-1

*T RECORD 1641 (%3151, #669)
00000: 036000 060156 035071 000270 000000 033760 000004 000443
00010: 017000 043260 000000 000000 000442 017000 031461 000000
00020: 000000 000440 017340 001562 146516 000440 000000 017360
00030: 101461 000000 000440 017340 000000 001562 146526 000440
00040: 017360 013463 000000 000000 000443 017000 031460 033053
00050: 000000 020040 005000 003561 000002 000441 000000 017000
00060: 103462 033043 000442 016000 000000 031460 000000 000040
00070: 007000 033760 000000 000004 000000 000000 000000 000000
00100: SAME: TO 000200-1
```

357

*T RECORD 1642 (%3152, #66A)
```
00000: 036000 060156 043064 000346 000000 000443 017000 043260
00010: 000000 000442 000000 017000 152570 034001 033056 001562
00020: 000000 146522 000440 017340 031461 000000 000000 000440
00030: 017360 001562 146532 000440 000000 017340 101461 000000
00040: 000440 017360 000000 013463 000000 000443 017000 031460
00050: 000000 033066 020040 005000 003561 000002 000000 000441
00060: 017000 103462 033056 000442 000000 016000 031460 000000
00070: 000040 007000 000000 033760 000000 000000 000000 000000
00100: SAME: TO 000200-1
```

*T RECORD 1643 (%3153, #66B)
```
00000: 036000 060156 034336 000424 000000 022400 000440 017000
00010: 031760 135336 000000 000440 017340 121560 000000 000500
00020: 000000 017000 033760 062000 000040 017000 000000 121560
00030: 033075 020500 005000 023415 000000 034001 033074 031460
00040: 033104 120040 000000 005000 043260 000000 000442 017000
00050: 000000 001161 000000 000442 017340 033760 000000 000000
00060: 000500 017140 003562 000002 000000 000442 017260 031460
00070: 000000 000440 000000 017170 000000 000000 000000 000000
00100: SAME: TO 000200-1
```

*T RECORD 1644 (%3154, #66C)
```
00000: 036000 060156 053447 000502 000000 111562 000010 000440
00010: 017000 031460 000000 033076 120040 005000 031460 000000
00020: 000000 000040 007000 031760 146510 000440 000000 017340
00030: 103760 000000 000504 017070 000000 033760 000020 000445
00040: 017000 031760 000000 146515 000440 017340 031760 000000
00050: 000000 000500 017000 037541 034001 033112 000000 041260
00060: 033121 120440 005070 021760 000000 000000 000440 017030
00070: 041564 000010 000000 000440 000000 000000 000000 000000
00100: SAME: TO 000200-1
```

*T RECORD 1645 (%3155, #66D)
```
00000: 036000 060156 101721 000560 000000 017000 031460 033136
00010: 120040 005000 000000 111564 000004 000440 017000 011464
00020: 000000 033136 020440 005030 043260 000000 000000 000445
00030: 017000 033760 000002 000442 000000 017000 033760 146504
00040: 000440 017000 000000 001160 000000 000442 017340 043564
00050: 000000 000000 000501 017000 031460 033127 000000 020040
00060: 005000 033760 000377 000441 000000 017000 001562 146511
00070: 000440 017300 000000 101055 000000 000000 000000 000000
00100: SAME: TO 000200-1
```

*T RECORD 1646 (%3156, #66E)
```
00000: 036000 060156 017317 000636 000000 034001 033130 013462
00010: 000000 000442 000000 017000 031461 033123 114440 005070
00020: 000000 033760 146511 000440 017000 031460 000000 003540
00030: 000040 006000 033465 000000 000000 000444 017000 033141
00040: 000000 020040 000000 003000 033760 000040 000444 017060
00050: 000000 031760 146510 000440 017360 031460 000000 003564
00060: 000040 006000 033760 000024 000000 000441 017000 031760
00070: 101362 000440 000000 017300 000000 000000 000000 000000
00100: SAME: TO 000200-1
```

*T RECORD 1647 (%3157, #66F)
```
00000: 036000 060156 021732 000714 000000 001561 100001 000440
00010: 017070 001561 000000 074402 000440 017340 033760 177717
```

```
00020: 000000 000441 017000 015337 034001 033146 000000 041561
00030: 000000 000500 017030 031564 000000 000000 000500 007070
00040: 033760 000024 000000 000441 017000 031760 146546 000440
00050: 000000 017340 031760 000000 000500 017000 000000 041260
00060: 033157 020440 005070 033760 000000 000100 000442 017000
00070: 031760 000004 000000 000440 000000 000000 000000 000000
00100: SAME: TO 000200-1

*T RECORD 1648 (%3160, #670)
00000: 036000 060156 164067 000772 000000 017030 031460 033162
00010: 000040 016000 000000 101760 000000 000440 017070 033760
00020: 000000 000200 000442 017000 031760 000005 000000 000440
00030: 017030 031460 000000 000040 000000 037150 031760 145704
00040: 000440 017360 000000 056000 034001 033164 033760 010400
00050: 000000 000443 017000 031760 000145 000440 000000 017340
00060: 031563 000000 000500 017070 000000 031460 000000 000040
00070: 037170 031760 000000 101362 000000 000000 000000 000000
00100: SAME: TO 000200-1

*T RECORD 1649 (%3161, #671)
00000: 036000 060156 036412 001050 000000 000440 017300 001561
00010: 100001 000440 000000 017070 001561 074402 000440 017340
00020: 000000 033760 177477 000443 017000 041563 000000 000000
00030: 000500 017030 031562 000000 000000 000500 007070 031460
00040: 033272 000040 000000 006000 031460 020747 000040 006000
00050: 000000 043260 000000 005445 017000 031760 000000 146546
00060: 000440 017340 031001 034001 000000 033202 021760 000000
00070: 000500 017000 000000 031460 000000 000000 000000 000000
00100: SAME: TO 000200-1

*T RECORD 1650 (%3162, #672)
00000: 036000 060156 013453 001126 000000 033211 020040 005000
00010: 031460 033221 000000 000040 006000 033462 033221 000441
00020: 000000 006000 033463 033221 000441 006000 000000 033464
00030: 033221 000441 006000 031460 000000 033215 000040 016000
00040: 031460 033233 000000 000040 006000 033462 033233 000441
00050: 000000 006000 033463 033233 000441 006000 000000 033464
00060: 033233 000441 006000 031460 000000 033506 150040 006000
00070: 031460 033263 000000 050040 000000 000000 000000 000000
00100: SAME: TO 000200-1

*T RECORD 1651 (%3163, #673)
00000: 036000 060156 005764 001204 000000 006000 031460 020702
00010: 000040 006000 000000 147133 034001 033220 031460 000000
00020: 000000 000040 007000 001565 135326 000440 000000 017340
00030: 121561 000000 000500 017000 000000 031460 033225 040040
00040: 005000 031461 000000 000000 001440 017070 031460 000000
00050: 000000 000040 017140 111561 000000 000500 000000 017000
00060: 031460 033231 040040 005000 000000 031461 000000 001440
00070: 017070 003565 000000 000002 000000 000000 000000 000000
00100: SAME: TO 000200-1

*T RECORD 1652 (%3164, #674)
00000: 036000 060156 047662 001262 000000 000445 017000 031460
00010: 000000 000040 000000 007000 001565 135326 000440 017340
00020: 000000 113561 000000 000506 017140 031460 000000 033247
00030: 014040 005000 133542 034001 000000 033236 123561 000000
00040: 000507 017000 000000 031460 033247 014040 005000 031466
```

```
00050: 000000 000000 000440 017000 031467 033243 000000 120440
00060: 005000 031460 033247 020040 000000 005000 121167 000000
00070: 001446 017000 000000 031460 000000 000000 000000 000000
00100: SAME: TO 000200-1


*T RECORD 1653 (%3165, #675)
00000: 036000 060156 066103 001340 000000 033246 040040 005000
00010: 101461 033247 000000 000440 016270 011461 000000 000440
00020: 000000 017070 003565 000002 000445 017000 000000 031460
00030: 000000 000040 007000 033760 000000 146426 000441 017000
00040: 033760 146536 000000 000442 017000 033760 000010 000444
00050: 000000 017000 006777 034001 033254 031461 000000 000000
00060: 000440 017340 031760 000000 000000 000500 017300 031462
00070: 000000 000440 000000 017070 000000 000000 000000 000000
00100: SAME: TO 000200-1


*T RECORD 1654 (%3166, #676)
00000: 036000 060156 131656 001416 000000 103461 000000 000441
00010: 017000 103462 000000 000000 000442 017000 013464 000000
00020: 000000 000444 017000 033254 000000 020040 000000 003000
00030: 031760 146607 000440 017340 000000 033760 000000 000507
00040: 017000 101760 000000 146607 000440 017340 101760 000000
00050: 000000 000500 017070 121567 000000 000500 000000 017000
00060: 031460 000000 040040 007000 000000 031467 000000 000440
00070: 007070 022104 000000 034001 000000 000000 000000 000000
00100: SAME: TO 000200-1


*T RECORD 1655 (%3167, #677)
00000: 036000 060156 135031 001474 000000 033272 031460 033310
00010: 000040 006000 000000 013464 000000 000441 017000 113561
00020: 000000 000010 000442 017000 033760 146547 000000 000443
00030: 017000 001163 000000 000442 000000 017340 001561 146547
00040: 000440 017360 000000 013462 000000 000442 017000 013461
00050: 000000 033276 114441 005000 031461 000000 000000 000440
00060: 017000 031460 033307 014040 000000 005000 023760 000010
00070: 000442 017000 000000 033760 000000 000000 000000 000000
00100: SAME: TO 000200-1


*T RECORD 1656 (%3170, #678)
00000: 036000 060156 005140 001552 000000 135326 000443 017000
00010: 031460 033276 000000 000040 016000 031460 000000 000040
00020: 000000 007000 173706 034001 033310 033760 000000 000010
00030: 000445 017000 043260 000000 000000 000444 017000 031760
00040: 146607 000440 000000 017340 101760 000000 000500 017030
00050: 000000 003165 000000 000444 017000 021760 000000 000000
00060: 000500 017030 033314 000000 000000 020040 003000 033760
00070: 000024 000441 000000 017000 000000 000000 000000 000000
00100: SAME: TO 000200-1


*T RECORD 1657 (%3171, #679)
00000: 036000 060156 135437 001630 000000 031760 101362 000440
00010: 017300 001561 000000 100001 000440 017070 001561 074402
00020: 000000 000440 017300 031760 052525 000440 000000 017070
00030: 001561 074476 000440 017300 000000 031760 000125 000440
00040: 017070 102022 000000 034001 033326 031460 000000 000440
00050: 000000 017340 031760 000000 000500 017000 000000 031460
00060: 033466 020040 006000 031460 000000 033372 000040 006000
00070: 031760 146510 000000 000440 000000 000000 000000 000000
```

360

```
00100: SAME: TO 000200-1

*T RECORD 1658 (%3172, #67A)
00000: 036000 060156 011274 001706 000000 017300 101760 000000
00010: 000440 017070 000000 031460 033105 000040 006000 031760
00020: 000000 000000 000440 017030 031460 002514 000000 000040
00030: 006000 031760 032766 000440 000000 017270 031460 000000
00040: 000040 007000 000000 101760 000000 000440 017030 031760
00050: 000000 146307 000440 017360 031460 033412 000000 000040
00060: 006000 140426 034001 033344 000000 031460 033525 000040
00070: 006000 031460 000000 000000 000000 000000 000000 000000
00100: SAME: TO 000200-1

*T RECORD 1659 (%3173, #67B)
00000: 036000 060156 064447 001764 000000 000040 007000 031760
00010: 146510 000440 000000 017300 031760 000003 000440 017070
00020: 000000 031760 000377 000440 017170 031760 000000 000377
00030: 000440 017170 043260 000000 000000 000442 017170 021760
00040: 135326 000440 000000 017300 043260 000000 000441 017000
00050: 000000 033760 000010 000443 017000 035463 000000 000000
00060: 000443 017002 031760 047040 000000 000440 017170 111760
00070: 003720 000440 000000 017170 000000 000000 000000 000000
00100: SAME: TO 000200-1

*T RECORD 1660 (%3174, #67C)
00000: 036000 060156 121250 002042 000000 103462 000000 000442
00010: 017000 105722 000000 034001 033362 121162 000000 000443
00020: 000000 017000 031460 033357 014040 005000 000000 031461
00030: 000000 000440 017000 031460 000000 033371 120040 005000
00040: 033462 000000 000000 000441 017000 021760 146536 000440
00050: 000000 017300 043260 033357 000442 016000 000000 031460
00060: 000000 000040 007000 101760 000000 000000 000440 017030
00070: 031760 146307 000000 000440 000000 000000 000000 000000
00100: SAME: TO 000200-1

*T RECORD 1661 (%3175, #67D)
00000: 036000 060156 172336 002120 000000 017360 031460 033412
00010: 000040 006000 000000 031460 000000 000040 037150 031760
00020: 000000 000142 000440 017340 033760 077377 000000 000442
00030: 017000 002526 034001 033400 000000 041562 000000 000500
00040: 017070 031760 000000 000145 000440 017340 033760 010400
00050: 000000 000442 017000 031562 000000 000500 000000 017070
00060: 031760 000004 000440 017030 000000 031760 145704 000440
00070: 017360 033760 000000 146511 000000 000000 000000 000000
00100: SAME: TO 000200-1

*T RECORD 1662 (%3176, #67E)
00000: 036000 060156 130653 002176 000000 000440 037170 031460
00010: 003540 000040 000000 006000 031760 146546 000440 017300
00020: 000000 041260 000000 000440 007070 031760 000000 146307
00030: 000440 017340 031760 000000 000000 000500 017000 041260
00040: 033422 020440 000000 005070 033760 146416 000440 017000
00050: 000000 054011 034001 033416 031460 021362 000000 000040
00060: 006000 031460 021331 000040 000000 006000 033760 000125
00070: 000442 017000 000000 031460 000000 000000 000000 000000
00100: SAME: TO 000200-1

*T RECORD 1663 (%3177, #67F)
```

361

```
00000: 036000 060156 015755 002254 000000 033437 000040 016000
00010: 031760 000001 000000 000440 017070 033760 146416 000440
00020: 000000 017000 031460 021210 000040 006000 000000 033760
00030: 146316 000440 017000 031460 000000 021057 000040 006000
00040: 033760 146336 000000 000440 017000 031460 021057 000040
00050: 000000 006000 033760 146356 000440 017000 000000 031460
00060: 021057 000040 006000 033760 000000 146376 000440 017000
00070: 063343 034001 000000 033434 000000 000000 000000 000000
00100: SAME: TO 000200-1

*T RECORD 1664 (%3200, #680)
00000: 036000 060156 154043 002332 000000 031460 021057 000040
00010: 006000 031460 000000 033251 000040 006000 033760 000225
00020: 000000 000442 017000 033760 000024 000441 000000 017000
00030: 031760 101362 000440 017300 000000 001561 100001 000440
00040: 017070 001561 000000 074476 000440 017300 031462 000000
00050: 000000 000440 007070 031760 135326 000440 000000 017340
00060: 033760 000377 000451 017000 000000 121571 000000 000500
00070: 017000 031460 000000 033453 000000 000000 000000 000000
00100: SAME: TO 000200-1

*T RECORD 1665 (%3201, #681)
00000: 036000 060156 125213 002410 000000 040040 005000 041260
00010: 000000 000440 000000 017070 031460 000005 000240 017160
00020: 000000 124144 034001 033452 031460 033003 000000 000040
00030: 006000 033760 146416 001440 000000 017000 031460 021561
00040: 000040 006000 000000 101260 000000 000440 017000 031460
00050: 000000 021512 020040 006000 031460 000000 000000 000040
00060: 007000 031460 033466 000040 000000 006000 031760 146307
00070: 000440 017340 000000 031760 000000 000000 000000 000000
00100: SAME: TO 000200-1

*T RECORD 1666 (%3202, #682)
00000: 036000 060156 124326 002466 000000 000000 000500 017000
00010: 031460 021412 000000 120040 006000 101760 146607 000440
00020: 000000 017300 041260 000000 000440 007070 000000 031460
00030: 033346 000040 006000 031460 000000 020742 000040 006000
00040: 021244 034001 000000 033470 031460 000000 000040 007000
00050: 000000 103760 146607 000446 017000 031466 000000 000000
00060: 000440 017340 033760 000000 000000 000514 017000 031460
00070: 033505 020040 000000 005000 000000 000000 000000 000000
00100: SAME: TO 000200-1

*T RECORD 1667 (%3203, #683)
00000: 036000 060156 157672 002544 000000 031460 033506 000040
00010: 006000 011474 000000 000000 000440 017030 031466 000000
00020: 000000 000440 017360 031460 020702 000040 000000 006000
00030: 031460 033003 000040 006000 000000 031760 146307 000440
00040: 017340 031760 000000 000000 000500 017000 031460 021412
00050: 000000 120040 006000 031460 000000 000040 000000 007000
00060: 133162 034001 033506 031460 000000 033310 000040 006000
00070: 043260 000000 000000 006441 000000 000000 000000 000000
00100: SAME: TO 000200-1

*T RECORD 1668 (%3204, #684)
00000: 036000 060156 054162 002622 000000 017000 043260 000000
00010: 000442 017000 000000 033760 135326 000443 017000 001562
00020: 000000 146547 000440 017340 001163 000000 000000 000441
```

```
00030: 017360 103461 000000 000441 000000 017000 103462 000000
00040: 000442 017000 000000 111562 000010 000440 017000 031460
00050: 000000 033512 014040 005000 121162 000000 000000 000444
00060: 017000 033512 033524 020042 000000 001000 033760 146547
00070: 000443 017000 000000 043260 000000 000000 000000 000000
00100: SAME: TO 000200-1

*T RECORD 1669 (%3205, #685)
00000: 036000 060156 027370 002700 000000 033512 002441 016000
00010: 046014 012001 000000 033524 031460 000000 000040 007000
00020: 000000 031760 135023 000440 017300 041260 000000 000000
00030: 000440 017070 031760 135022 000000 000440 017360 031460
00040: 000000 000040 000000 007000 033761 034000 146307 000000
00050: 000000 000000 000000 135412 000000 000000 000000 137413
00060: 000002 000202 000454 146436 000000 030004 000000 146536
00070: 135337 146537 000000 146446 000000 000000 000000 000000
00100: SAME: TO 000200-1

*T RECORD 1670 (%3206, #686)
00000: 036000 060156 076737 002756 000000 030004 000000 146537
00010: 146536 135340 000000 177777 000002 000324 000454 146440
00020: 000000 030004 000000 146540 135337 146541 000000 146450
00030: 030004 000000 146541 146540 000000 135340 177777 000002
00040: 000446 000454 000000 146442 030004 000000 146542 135337
00050: 000000 146543 146452 030004 000000 146543 000000 146542
00060: 135340 177777 000002 036624 000000 034000 146377 000570
00070: 000454 146444 000000 030004 000000 000000 000000 000000
00100: SAME: TO 000200-1

*T RECORD 1671 (%3207, #687)
00000: 036000 060156 161635 003034 000000 000000 146544 135337
00010: 146545 146454 000000 030004 000000 146545 146544 135340
00020: 000000 177777 000002 000050 000470 146456 000000 030004
00030: 146460 030004 177777 146333 000000 146326 146353 146346
00040: 146373 146366 000000 146413 146406 041555 064556 046555
00050: 000000 064556 054555 064556 041155 064556 000000 041555
00060: 060570 046555 060570 054555 000000 060570 041155 060570
00070: 040555 064556 000000 040555 000000 000000 000000 000000
00100: SAME: TO 000200-1

*T RECORD 1672 (%3210, #688)
00000: 033400 060152 122542 003112 000000 060570 020053 025453
00010: 020040 025453 000000 020053 061042 013400 146467 020040
00020: 000000 025440 025453 020040 020055 026455 000000 020040
00030: 026455 020055 020040 026440 000000 026455 020040 000001
00040: 000002 000004 000000 000010 000003 000000 000000 000000
00050: 000000 000377 000000 135064 000400 146546 000000 000000
00060: 146546 001000 146607 000003 000000 000000 146612 000000
00070: SAME: TO 000200-1

*T RECORD 1673 (%3211, #689)
00000: 002000 120000 120000 000000 000000 000000 000000 000000
00010: SAME: TO 000200-1

*T RECORD 1674 (%3212, #68A)
00000: 025000 020000 057700 077103 046503 044040 001230 000000
00010: SAME: TO 000020-1
00020: 000000 020040 045040 044516 051524 042501 042040 047506
```

```
00030: 020050 026040 041517 046117 051040 046501 052103 044040
00040: 051101 041510 042514 020074 034065 030063 031066 027060
00050: 034462 032476 000000 000000 000000 000000 000000 000000
00060: SAME: TO 000200-1


*T RECORD 1675 (%3213, #68B)
00000: 003400 040001 051607 077103 046503 044000 000000 000000
00010: SAME: TO 000200-1


*T RECORD 1676 (%3214, #68C)
00000: 036000 060156 030035 000000 000000 001227 034001 032766
00010: 041560 000400 000000 000440 017000 032775 032771 120040
00020: 000000 002000 031460 000132 000040 016000 000000 031760
00030: 145650 001440 017300 031760 000000 000002 000440 017070
00040: 031760 145651 000000 000440 017360 031460 000000 000040
00050: 000000 007000 031760 145650 000440 017300 000000 031760
00060: 000003 000440 017070 031760 000000 145651 000440 017360
00070: 031460 000132 000000 000040 000000 000000 000000 000000
00100: SAME: TO 000200-1


*T RECORD 1677 (%3215, #68D)
00000: 036000 060156 057475 000056 000000 016000 031760 145650
00010: 000440 017340 000000 033760 000002 000440 017000 121560
00020: 000000 000000 000500 017000 165161 034001 000000 033004
00030: 033760 000003 000040 017000 000000 121560 033015 020500
00040: 005000 031460 000000 033055 120040 005000 033760 146307
00050: 000000 000440 017000 041260 002745 000440 000000 006070
00060: 033760 146342 000440 017000 000000 031460 002745 000040
00070: 006000 031760 000000 145651 000000 000000 000000 000000
00100: SAME: TO 000200-1


*T RECORD 1678 (%3216, #68E)
00000: 036000 060156 044410 000134 000000 000440 017300 041260
00010: 000000 000440 000000 007070 033760 146307 000440 017000
00020: 000000 041260 002745 000440 006070 033760 000000 024125
00030: 000440 017000 031460 015705 000000 000040 006000 033760
00040: 146320 000440 000000 017000 070333 034001 033022 031460
00050: 000000 002745 000040 006000 021760 146353 000000 000440
00060: 017300 021760 000000 000440 000000 017030 031460 000002
00070: 000240 017160 000000 031760 000000 000000 000000 000000
00100: SAME: TO 000200-1


*T RECORD 1679 (%3217, #68F)
00000: 036000 060156 151121 000212 000000 145651 000440 017300
00010: 101760 000000 000000 000440 017070 031460 033043 050040
00020: 000000 005000 031760 101362 000440 017300 000000 031760
00030: 100047 000440 017070 031760 000000 135336 000440 017340
00040: 033760 022400 000000 000440 017000 121560 000000 000500
00050: 000000 017000 041260 033041 020440 005030 000000 033760
00060: 000002 000440 017000 115172 000000 034001 033040 001560
00070: 000000 000520 000000 017340 000000 000000 000000 000000
00100: SAME: TO 000200-1


*T RECORD 1680 (%3220, #690)
00000: 036000 060156 133566 000270 000000 031760 146366 000440
00010: 017360 041260 000000 000001 000640 017270 033760 146372
00020: 000000 000440 017000 031460 022415 000040 000000 006000
00030: 033760 146437 000440 017000 000000 031460 014073 000040
```

```
00040: 006000 033760 000000 146367 000440 017000 031460 020646
00050: 000000 000040 006000 031760 000102 000440 000000 017300
00060: 031760 000077 000440 017070 000000 031760 144732 000440
00070: 017300 101760 000000 000000 000000 000000 000000 000000
00100: SAME: TO 000200-1


*T RECORD 1681 (%3221, #691)
00000: 036000 060156 043343 000346 000000 000440 017070 031460
00010: 033120 000040 000000 006000 042410 034001 033056 031460
00020: 000000 000000 000040 007000 033260 000000 000000 000440
00030: 017000 035460 000004 000640 000000 017002 001560 033064
00040: 000440 017030 000000 031460 000000 000100 015000 031460
00050: 000000 000000 000040 007000 031460 033070 000000 000040
00060: 016000 031460 033072 000040 000000 016000 031460 033074
00070: 000040 016000 000000 031460 000000 000000 000000 000000
00100: SAME: TO 000200-1


*T RECORD 1682 (%3222, #692)
00000: 036000 060156 167641 000424 000000 033076 000040 016000
00010: 033760 000012 000000 000440 017000 031460 033077 000040
00020: 000000 016000 103760 000000 000440 017000 000000 031460
00030: 033077 000040 016000 027464 000000 034001 033074 023760
00040: 000000 000440 000000 017000 031460 033077 000040 016000
00050: 000000 033760 177766 000440 017000 031760 000000 101415
00060: 000440 017340 021760 000000 000000 000500 017036 033760
00070: 000007 000441 000000 017000 000000 000000 000000 000000
00100: SAME: TO 000200-1


*T RECORD 1683 (%3223, #693)
00000: 036000 060156 061201 000502 000000 043561 000000 000501
00010: 017000 001561 000000 146363 000440 017340 003560 000000
00020: 000000 000500 017000 101760 135336 000440 000000 017340
00030: 121560 000000 000500 017000 000000 031460 033112 040040
00040: 005000 001561 000000 146363 000440 017360 031460 000000
00050: 000000 000040 007000 047746 034001 033112 000000 031460
00060: 000000 000040 017140 121560 000000 000000 000500 017000
00070: 031460 033116 000000 040040 000000 000000 000000 000000
00100: SAME: TO 000200-1


*T RECORD 1684 (%3224, #694)
00000: 036000 060156 070630 000560 000000 005000 031460 000000
00010: 000440 017030 000000 001561 146363 000440 017360 031460
00020: 000000 000000 000040 007000 031760 000145 000000 000440
00030: 017340 031760 000000 000500 000000 017000 031460 033143
00040: 120040 005000 000000 031460 033144 000040 006000 031260
00050: 000000 000000 000440 017000 031460 033143 000000 020040
00060: 005000 033760 146331 000440 000000 017000 031460 002745
00070: 000040 006000 000000 001001 000000 000000 000000 000000
00100: SAME: TO 000200-1


*T RECORD 1685 (%3225, #695)
00000: 036000 060156 145711 000636 000000 034001 033130 033760
00010: 146367 000440 000000 017000 031460 020646 000040 006000
00020: 000000 033760 146357 000440 017000 031460 000000 003540
00030: 000040 006000 031760 000145 000000 000440 017340 033760
00040: 010000 000440 000000 017000 031560 000000 000500 017070
00050: 000000 031760 145703 000440 017300 041260 000000 000000
00060: 000440 017070 033760 146465 000000 000440 017000 031460
```

```
00070: 014073 000040 000000 006000 000000 000000 000000 000000
00100: SAME: TO 000200-1
```

*T RECORD 1686 (%3226, #696)
```
00000: 036000 060156 063706 000714 000000 031460 000000 000040
00010: 007000 043260 000000 000000 000440 017000 040260 000000
00020: 000000 000440 017000 034254 022001 033146 000000 001560
00030: 146363 000440 017340 033760 000000 000000 000501 017000
00040: 001560 146353 000000 000440 017340 121561 000000 000500
00050: 000000 017000 031461 033154 020440 005070 000000 100760
00060: 000000 000440 017000 103460 000000 000000 000440 017000
00070: 111560 000004 000000 000440 000000 000000 000000 000000
00100: SAME: TO 000200-1
```

*T RECORD 1687 (%3227, #697)
```
00000: 036000 060156 011313 000772 000000 017000 033146 000000
00010: 020040 003000 000000 016165 034000 146307 100014 000000
00020: 000000 001000 000000 000600 000000 000000 000000 000000
00030: 000000 100017 000000 001000 000000 000000 000600 000377
00040: 000377 000377 000000 000377 100010 000230 000320 000060
00050: 000000 000450 000377 000377 000377 000377 000000 100010
00060: 000230 000320 000060 000450 000000 000000 000000 000000
00070: 000000 177777 000000 177777 000000 000000 000000 000000
00100: SAME: TO 000200-1
```

*T RECORD 1688 (%3230, #698)
```
00000: 036000 060156 010404 001050 000000 177777 177777 000000
00010: 000000 000000 000000 000377 000000 000000 000000 000144
00020: 000000 146363 146357 137413 000622 000156 000000 000000
00030: 000033 000622 037543 034000 000000 146377 000156 000000
00040: 000033 000622 000000 000141 000015 000001 000622 000141
00050: 000000 000033 000001 000622 000001 000015 000000 000017
00060: 000762 000001 000015 000017 000000 000732 000001 000015
00070: 000017 000702 000000 000001 000000 000000 000000 000000
00100: SAME: TO 000200-1
```

*T RECORD 1689 (%3231, #699)
```
00000: 036000 060156 122432 001126 000000 000015 000017 000652
00010: 000001 000015 000000 000017 177777 100001 000633 000000
00020: 000000 000001 000001 146520 000663 000000 000000 000001
00030: 000001 146521 000713 000000 000000 000001 000001 146522
00040: 000743 000000 000000 000001 000001 146523 177777 100001
00050: 000000 000624 014321 017400 146467 000017 000000 000001
00060: 030003 146363 000654 000017 000000 000001 030003 146364
00070: 000704 000017 000000 000001 000000 000000 000000 000000
00100: SAME: TO 000200-1
```

*T RECORD 1690 (%3232, #69A)
```
00000: 016000 060124 140646 001204 000000 030003 146365 000734
00010: 000017 000001 000000 000003 146524 000766 000017 000001
00020: 000000 000001 135336 177777 041440 046440 000000 054440
00030: 041040 047506 043040 012311 000000 000000 000000 000000
00040: SAME: TO 000200-1
```

*T RECORD 1691 (%3233, #69B)
```
00000: 002000 120000 120000 000000 000000 000000 000000 000000
00010: SAME: TO 000200-1
```

```
*T RECORD 1692 (%3234, #69C)
00000: 025000 020000 055056 077103 046103 051040 002263 000000
00010: SAME: TO 000020-1
00020: 000000 020111 046501 043505 051055 041517 046117 051055
00030: 041517 051122 042503 052111 047516 026040 047523 047101
00040: 052074 034067 030462 030066 027061 031465 034076 020040
00050: 020040 020040 000000 000000 000000 000000 000000 000000
00060: SAME: TO 000200-1

*T RECORD 1693 (%3235, #69D)
00000: 003400 040001 056207 077103 046103 051000 000000 000000
00010: SAME: TO 000200-1

*T RECORD 1694 (%3236, #69E)
00000: 036000 060156 040453 000000 000000 002262 001000 146314
00010: 000000 000000 000000 146314 002000 146317 000000 001000
00020: 000000 000000 000001 147320 003000 146324 000000 146343
00030: 100017 000000 001000 000000 000000 000001 015707 003000
00040: 146333 146343 000000 060200 000000 001000 000000 000001
00050: 000000 176077 000400 146342 150343 116705 000000 000400
00060: 151343 000000 151343 000400 000000 152164 100013 052177
00070: 000400 152166 000000 000003 000000 000000 000000 000000
00100: SAME: TO 000200-1

*T RECORD 1695 (%3237, #69F)
00000: 036000 060156 003700 000056 000000 152171 002000 152170
00010: 000003 177777 000000 177777 100013 052204 000400 152175
00020: 000000 000001 152176 005000 152177 000001 000000 000000
00030: 000000 100013 000000 001000 000000 000000 000600 000000
00040: 000000 054013 000000 034001 032766 031760 152211 000440
00050: 000000 017340 033760 000000 000501 017000 000000 111561
00060: 000453 000440 017000 101461 000000 032773 014440 005030
00070: 041260 000000 000000 000440 000000 000000 000000 000000
00100: SAME: TO 000200-1

*T RECORD 1696 (%3240, #6A0)
00000: 036000 060156 050013 000134 000000 017030 031460 000000
00010: 000040 017060 000000 001561 152213 000440 017300 031460
00020: 000000 000000 000440 007070 031760 152212 000000 000440
00030: 017340 033760 000000 000500 000000 017000 001560 152213
00040: 000440 017340 000000 031760 000000 000500 017000 031460
00050: 000000 000000 020040 007000 031460 033060 000000 000040
00060: 006000 152461 034001 033004 000000 031760 152212 000440
00070: 017340 033760 000000 000000 000000 000000 000000 000000
00100: SAME: TO 000200-1

*T RECORD 1697 (%3241, #6A1)
00000: 036000 060156 110465 000212 000000 000500 017000 111560
00010: 000453 000440 000000 017000 101460 033011 014440 005030
00020: 000000 041260 000000 000440 017030 033760 000000 000006
00030: 000441 017060 001560 152213 000000 000440 017340 033760
00040: 000000 000500 000000 017000 041260 000000 000440 017070
00050: 000000 031460 005356 000040 006160 031460 000000 000000
00060: 000040 007000 041260 000000 000000 000440 017030 031760
00070: 152211 000440 000000 017360 000000 000000 000000 000000
00100: SAME: TO 000200-1

*T RECORD 1698 (%3242, #6A2)
```

```
00000: 036000 060156 022137 000270 000000 031460 000000 000240
00010: 017160 014353 000000 034001 033022 031760 146341 000440
00020: 000000 017300 041260 000000 000440 017070 000000 031760
00030: 150343 000440 017170 031460 000000 000000 000440 017340
00040: 033760 000377 000000 000440 017000 033760 000000 000512
00050: 000000 017140 033760 000000 000506 017140 000000 033760
00060: 000000 000507 017140 033760 000000 000000 000510 017140
00070: 033760 000000 000000 000511 000000 000000 000000 000000
00100: SAME: TO 000200-1

*T RECORD 1699 (%3243, #6A3)
00000: 036000 060156 114310 000346 000000 017140 031760 146313
00010: 000440 017360 000000 031760 000000 000500 017700 031471
00020: 000000 000000 000440 017270 031470 000000 000000 000440
00030: 017270 055111 034001 033040 000000 031467 000000 000440
00040: 017270 031466 000000 000000 000440 017270 031760 130473
00050: 000000 000440 017300 031472 000000 000440 000000 017070
00060: 031460 000000 120040 007000 000000 031760 144742 000440
00070: 017340 033760 000000 000002 000000 000000 000000 000000
00100: SAME: TO 000200-1

*T RECORD 1700 (%3244, #6A4)
00000: 036000 060156 013142 000424 000000 000452 017000 121572
00010: 000000 000500 000000 017000 031460 030625 020040 006000
00020: 000000 023760 000000 000457 017000 103477 000000 000000
00030: 000457 017000 033760 000600 000000 000441 017000 121177
00040: 000000 000441 000000 017000 031460 000000 114040 007000
00050: 000000 137305 034001 033056 031460 033060 000000 000040
00060: 006000 031460 033052 000040 000000 016000 031760 130473
00070: 000440 017340 000000 031760 000000 000000 000000 000000
00100: SAME: TO 000200-1

*T RECORD 1701 (%3245, #6A5)
00000: 036000 060156 033444 000502 000000 000000 000500 017000
00010: 031460 033100 000000 020040 005000 031760 146307 000440
00020: 000000 017340 033760 000000 000506 017140 000000 033760
00030: 000000 000507 017140 033760 000000 000000 000510 017140
00040: 033760 000000 000000 000511 017140 031760 000000 000500
00050: 000000 017700 031760 152212 000440 017340 000000 033760
00060: 000000 000500 017000 001560 000000 152213 000440 017340
00070: 064275 034001 000000 033074 000000 000000 000000 000000
00100: SAME: TO 000200-1

*T RECORD 1702 (%3246, #6A6)
00000: 036000 060156 124174 000560 000000 033760 000000 000500
00010: 017000 001560 000000 000003 000440 017340 033760 001000
00020: 000000 000452 017000 123572 000000 000517 000000 017000
00030: 031760 146330 000440 017300 000000 033760 001000 000441
00040: 017000 001177 000000 000000 000441 017070 033760 146325
00050: 000000 000440 017100 041260 025200 000440 000000 006170
00060: 031760 146337 000440 017300 000000 033760 146334 000440
00070: 017000 001177 000000 025200 000000 000000 000000 000000
00100: SAME: TO 000200-1

*T RECORD 1703 (%3247, #6A7)
00000: 036000 060156 102431 000636 000000 000441 006070 033760
00010: 000377 001440 000000 017000 033760 177776 000452 017000
00020: 000000 035532 034001 033112 003572 000002 000000 000452
```

```
00030: 017000 037760 001000 000441 000000 017002 121172 000000
00040: 000441 017000 000000 031460 033223 020040 005000 035472
00050: 000000 000000 000442 017002 001562 150343 000000 000440
00060: 017340 043560 000000 000502 000000 017000 111562 033112
00070: 020540 005000 000000 031460 000000 000000 000000 000000
00100: SAME: TO 000200-1

*T RECORD 1704 (%3250, #6A8)
00000: 036000 060156 153767 000714 000000 033112 040040 005000
00010: 001572 146343 000000 005440 017340 043560 000000 000514
00020: 000000 017000 031760 000000 002500 017034 000000 043560
00030: 000000 000513 017140 043560 000000 000000 000516 017000
00040: 173732 034001 000000 033130 031760 000000 002500 017034
00050: 000000 043560 000000 000515 017000 030462 000000 000000
00060: 000440 017000 031466 000000 000000 000440 017000 043260
00070: 033140 020441 000000 005000 000000 000000 000000 000000
00100: SAME: TO 000200-1

*T RECORD 1705 (%3251, #6A9)
00000: 036000 060156 007652 000772 000000 031460 050000 000040
00010: 037151 004166 000000 000006 000641 017003 031260 050000
00020: 000000 004440 037171 003441 000000 024443 000000 017000
00030: 003173 000000 000443 017000 000000 041563 177400 000440
00040: 017000 031460 000000 033147 020040 005000 031460 033146
00050: 000000 014040 005000 033460 033147 000443 000000 016000
00060: 071370 034001 033146 043260 000000 000000 000443 017000
00070: 030462 000000 000000 000440 000000 000000 000000 000000
00100: SAME: TO 000200-1

*T RECORD 1706 (%3252, #6AA)
00000: 036000 060156 172706 001050 000000 017000 031467 000000
00010: 000440 017000 000000 043260 033155 020441 005000 031460
00020: 000000 050000 000040 037151 004167 000006 000000 000641
00030: 017003 031260 050000 004440 000000 037171 003441 000000
00040: 024444 017000 000000 003174 000000 000444 017000 041564
00050: 000000 177400 000440 017000 031460 033164 000000 020040
00060: 005000 031460 033163 014040 000000 005000 033460 033164
00070: 000444 016000 000000 043260 000000 000000 000000 000000
00100: SAME: TO 000200-1

*T RECORD 1707 (%3253, #6AB)
00000: 036000 060156 154643 001126 000000 000000 000444 017000
00010: 100337 034001 000000 033164 030462 000000 000440 017000
00020: 000000 031470 000000 000440 017000 043260 000000 033172
00030: 020441 005000 031460 050000 000000 000040 037151 004170
00040: 000006 000641 000000 017003 031260 050000 004440 037171
00050: 000000 003441 000000 024445 017000 003175 000000 000000
00060: 000445 017000 041565 177400 000000 000440 017000 031460
00070: 033201 020040 000000 005000 000000 000000 000000 000000
00100: SAME: TO 000200-1

*T RECORD 1708 (%3254, #6AC)
00000: 036000 060156 007265 001204 000000 031460 033200 014040
00010: 005000 033460 000000 033201 000445 016000 043260 000000
00020: 000000 000445 017000 030462 000000 000440 000000 017000
00030: 065650 034001 033202 031471 000000 000000 000440 017000
00040: 043260 033207 000000 020441 005000 031460 050000 000040
00050: 000000 037151 004171 000006 000641 017003 000000 031260
```

```
00060: 050000 004440 037171 003441 000000 000000 024453 017000
00070: 003176 000000 000000 000453 000000 000000 000000 000000
00100: SAME: TO 000200-1


*T RECORD 1709 (%3255, #6AD)
00000: 036000 060156 166040 001262 000000 017000 041573 177400
00010: 000440 017000 000000 031460 033216 020040 005000 031460
00020: 000000 033215 014040 005000 033460 033216 000000 000453
00030: 016000 043260 000000 000453 000000 017000 001572 146343
00040: 000440 017300 000000 031463 000000 002440 017034 011023
00050: 000000 034001 033220 031564 000000 000500 000000 017070
00060: 031465 000000 002440 017034 000000 031573 033112 000500
00070: 016170 031760 000000 146314 000000 000000 000000 000000
00100: SAME: TO 000200-1


*T RECORD 1710 (%3256, #6AE)
00000: 036000 060156 124565 001340 000000 000440 017340 031760
00010: 000000 000500 000000 017000 033233 033226 120041 001000
00020: 000000 031760 146330 000440 017300 031477 000000 000000
00030: 000440 017070 033760 146325 000000 000440 017100 031760
00040: 100000 000440 000000 017170 031460 025200 000040 006000
00050: 000000 031460 000000 000040 007000 033760 000000 000520
00060: 006457 017000 031760 146314 000000 000440 017340 102737
00070: 034001 033236 000000 031760 000000 000000 000000 000000
00100: SAME: TO 000200-1


*T RECORD 1711 (%3257, #6AF)
00000: 036000 060156 126454 001416 000000 000000 000500 017000
00010: 033760 000002 000000 021040 017000 121560 000000 014500
00020: 000000 007000 031460 000000 140040 007000 000000 031460
00030: 033244 050040 005000 033760 000000 000440 022457 017000
00040: 031760 134721 000000 000440 017340 033760 000033 000456
00050: 000000 017000 033760 000000 000501 017140 000000 033760
00060: 000144 000455 017000 033760 000000 000000 000502 017140
00070: 033760 000561 000000 000454 000000 000000 000000 000000
00100: SAME: TO 000200-1


*T RECORD 1712 (%3260, #6B0)
00000: 036000 060156 053154 001474 000000 017000 033760 000000
00010: 000503 017140 000000 121163 000000 000457 017000 165563
00020: 000000 034001 033254 121576 033257 040500 000000 005000
00030: 121163 033364 040454 005000 000000 031460 033364 140040
00040: 005000 031760 000000 151343 000440 017340 033760 000000
00050: 000000 000504 017000 033760 000377 000457 000000 017000
00060: 103464 000000 000443 017070 000000 121563 000145 000440
00070: 017000 121575 000000 000000 000000 000000 000000 000000
00100: SAME: TO 000200-1


*T RECORD 1713 (%3261, #6B1)
00000: 036000 060156 106021 001552 000000 014500 007000 033311
00010: 033355 140042 000000 001000 001561 001000 000440 017030
00020: 000000 031760 146330 000440 017360 033760 000000 146325
00030: 000440 017100 041260 025200 000000 000440 006170 151637
00040: 034001 033272 000000 037462 000000 000440 017002 033760
00050: 000000 177400 000456 017000 001560 146343 000000 000440
00060: 017340 043577 000000 000513 000000 017000 041576 000000
00070: 002500 017034 000000 033760 000000 000000 000000 000000
00100: SAME: TO 000200-1
```

EP 0 455 351 A2

```
*T RECORD 1714 (%3262, #6B2)
00000: 036000 060156 156460 001630 000000 000000 000512 017140
00010: 043577 000000 000000 000515 017000 041576 000000 002500
00020: 000000 017034 033760 000000 000514 017000 000000 031472
00030: 000000 000440 017030 037464 000000 000000 000644 017002
00040: 001564 151344 000000 000440 017360 031473 000000 000440
00050: 000000 017170 031474 000000 000440 017170 000000 071372
00060: 034001 033310 031475 000000 000000 000440 017170 111562
00070: 000001 000440 000000 017030 000000 000000 000000 000000
00100: SAME: TO 000200-1

*T RECORD 1715 (%3263, #6B3)
00000: 036000 060156 046503 001706 000000 031760 152165 000440
00010: 017360 111561 000000 000001 000440 017030 031760 152167
00020: 000000 000440 017360 031462 000000 000440 000000 017030
00030: 031760 152174 000440 017360 000000 031461 000000 000440
00040: 017030 031760 000000 152176 000440 017360 031760 000003
00050: 000000 000440 017030 101760 152165 000440 000000 017360
00060: 101760 152167 000440 017360 000000 031760 000001 000440
00070: 017030 101760 000000 152174 000000 000000 000000 000000
00100: SAME: TO 000200-1

*T RECORD 1716 (%3264, #6B4)
00000: 036000 060156 014222 001764 000000 000440 017360 042547
00010: 034001 033326 000000 101760 152176 000440 017360 033760
00020: 000000 152164 000440 017000 031460 003050 000000 000040
00030: 006000 033760 152173 000440 000000 017000 031460 002745
00040: 000040 006000 000000 031760 146314 000440 017340 031760
00050: 000000 000000 000500 017000 031460 033364 000000 020040
00060: 005000 001561 001000 000440 000000 017030 031760 146337
00070: 000440 017360 000000 033760 000000 000000 000000 000000
00100: SAME: TO 000200-1

*T RECORD 1717 (%3265, #6B5)
00000: 036000 060156 115755 002042 000000 146334 000440 017100
00010: 041260 025200 000000 000440 006170 001562 150343 000440
00020: 000000 017340 043577 033347 054500 005000 000000 051667
00030: 034001 033344 031460 033347 000000 120040 005000 031760
00040: 146315 000440 000000 017300 101760 000000 000440 017070
00050: 000000 031760 146313 000440 017340 121560 000000 000000
00060: 000500 017000 031460 033353 000000 054040 005000 033354
00070: 033364 040040 000000 001000 000000 000000 000000 000000
00100: SAME: TO 000200-1

*T RECORD 1718 (%3266, #6B6)
00000: 036000 060156 063510 002120 000000 031460 033364 140040
00010: 005000 031460 000000 033364 000440 016070 033760 130201
00020: 000000 000440 017000 031464 001427 000440 000000 006070
00030: 031760 135023 000440 017300 000000 033760 152202 000440
00040: 017000 041260 000000 002745 000440 006070 002374 034001
00050: 000000 033362 031760 146315 000440 017300 000000 041260
00060: 000000 000440 017070 031460 000000 000000 000040 007000
00070: 031460 000000 000000 000440 000000 000000 000000 000000
00100: SAME: TO 000200-1

*T RECORD 1719 (%3267, #6B7)
00000: 036000 060156 065227 002176 000000 017340 031760 000000
```

371

```
00010: 000500 017000 000000 031460 033374 020040 005000 031760
00020: 000000 135023 000440 017300 041260 000000 000000 000440
00030: 017070 031760 146315 000440 000000 017300 041260 000000
00040: 000440 017070 000000 101460 000000 000440 017340 031760
00050: 000000 000000 000500 017000 031460 033401 000000 020040
00060: 005000 033760 152202 000440 000000 017000 157146 004001
00070: 033400 031460 000000 002745 000000 000000 000000 000000
00100: SAME: TO 000200-1
```

```
*T RECORD 1720 (%3270, #6B8)
00000: 006400 060107 067750 002254 000000 000040 006000 031460
00010: 000000 000040 000000 007000 136605 000000 000000 000000
00020: SAME: TO 000200-1
```

```
*T RECORD 1721 (%3271, #6B9)
00000: 002000 120000 120000 000000 000000 000000 000000 000000
00010: SAME: TO 000200-1
```

```
*T RECORD 1722 (%3272, #6BA)
00000: 025000 020000 056571 077107 044123 052040 001734 000000
00010: SAME: TO 000020-1
00020: 000000 020042 044556 072145 071141 061564 064566 062440
00030: 063550 067563 072042 020074 034067 030071 030466 027061
00040: 033465 030476 020040 020040 020040 020040 020040 020040
00050: 020040 020040 000000 000000 000000 000000 000000 000000
00060: SAME: TO 000200-1
```

```
*T RECORD 1723 (%3273, #6BB)
00000: 003400 040001 055233 077107 044123 052000 000000 000000
00010: SAME: TO 000200-1
```

```
*T RECORD 1724 (%3274, #6BC)
00000: 036000 060156 023446 000000 000000 001733 034001 032766
00010: 031760 146553 000000 000440 017340 033760 000000 000500
00020: 000000 017000 033760 074402 000441 017000 000000 001561
00030: 000054 000440 017340 033760 000000 000000 000501 017000
00040: 061561 000300 000000 000440 017070 063560 000001 000441
00050: 000000 017030 031760 146553 000440 017360 000000 121161
00060: 000000 000440 017000 033760 000000 146350 000040 017000
00070: 031460 033003 000000 014040 000000 000000 000000 000000
00100: SAME: TO 000200-1
```

```
*T RECORD 1725 (%3275, #6BD)
00000: 036000 060156 032217 000056 000000 005000 031460 021210
00010: 000040 006000 000000 031460 033031 000040 016000 031460
00020: 000000 021362 000040 006000 157137 034001 000000 033004
00030: 031460 033031 000040 016000 000000 031760 146554 000440
00040: 017340 033760 000000 000000 000500 017000 033760 074476
00050: 000000 000441 017000 001561 000054 000440 000000 017340
00060: 033760 000000 000501 017000 000000 061561 000300 000440
00070: 017070 063560 000000 000001 000000 000000 000000 000000
00100: SAME: TO 000200-1
```

```
*T RECORD 1726 (%3276, #6BE)
00000: 036000 060156 102763 000134 000000 000441 017030 031760
00010: 146554 000440 000000 017360 121161 000000 000440 017000
00020: 000000 031460 033025 014040 005000 031460 000000 021347
00030: 000040 006000 033760 146374 000000 000440 017000 031460
```

```
00040: 021057 000040 000000 006000 157555 034001 033022 033760
00050: 000000 146430 000440 017000 031460 021057 000000 000040
00060: 006000 031460 033031 000040 000000 016000 033760 146374
00070: 000440 017000 000000 031460 000000 000000 000000 000000
00100: SAME: TO 000200-1

*T RECORD 1727 (%3277, #6BF)
00000: 036000 060156 046743 000212 000000 021331 000040 006000
00010: 033760 146430 000000 000440 017000 031460 021331 000040
00020: 000000 006000 031760 101362 000440 017300 000000 031760
00030: 100055 000440 017070 031460 000000 000000 000040 007000
00040: 001160 000000 000000 000444 017340 001161 000000 000444
00050: 000000 017360 113564 000001 000444 017000 000000 033034
00060: 000000 014040 003000 104375 000000 034001 033040 031760
00070: 130476 000440 000000 017340 000000 000000 000000 000000
00100: SAME: TO 000200-1

*T RECORD 1728 (%3300, #6C0)
00000: 036000 060156 067322 000270 000000 033760 000000 000500
00010: 017000 041260 000000 000000 000440 017070 013460 000000
00020: 000000 000440 017000 031460 033251 120040 000000 005000
00030: 031760 130477 000440 017340 000000 031760 000000 000500
00040: 017000 031460 000000 033066 120040 005000 101760 000000
00050: 000000 000440 017070 031460 002523 000040 000000 006000
00060: 041260 000000 000440 017030 000000 031760 146502 000440
00070: 017360 031460 000000 000001 000000 000000 000000 000000
00100: SAME: TO 000200-1

*T RECORD 1729 (%3301, #6C1)
00000: 036000 060156 064120 000346 000000 000240 017160 031760
00010: 146512 000440 000000 017360 104524 034001 033056 031460
00020: 000000 000001 000240 017160 031760 146506 000000 000440
00030: 017300 031760 000144 000440 000000 017070 031460 000001
00040: 000240 017160 000000 031760 146516 000440 017360 031460
00050: 000000 000001 000240 017160 031460 033142 000000 000040
00060: 006000 031460 000000 000040 000000 007000 031760 000062
00070: 000440 017030 000000 033760 000000 000000 000000 000000
00100: SAME: TO 000200-1

*T RECORD 1730 (%3302, #6C2)
00000: 036000 060156 117575 000424 000000 000016 000444 017000
00010: 031760 146502 000000 000440 017360 013464 000000 000444
00020: 000000 017160 031460 033071 114040 005000 000000 031460
00030: 033142 000040 006000 176704 000000 034001 033074 031760
00040: 000001 000440 000000 017030 031460 002514 000040 006000
00050: 000000 031760 101362 000440 017300 031760 000000 100055
00060: 000440 017070 031760 033114 000000 000440 017030 031760
00070: 135023 000440 000000 017360 000000 000000 000000 000000
00100: SAME: TO 000200-1

*T RECORD 1731 (%3303, #6C3)
00000: 036000 060156 071223 000502 000000 033760 146350 000440
00010: 017000 031460 000000 021210 000040 006000 031760 135204
00020: 000000 000440 017300 031760 146374 000440 000000 017070
00030: 031760 146430 000440 017170 000000 101760 000000 000440
00040: 017030 031760 000000 146553 000440 017360 041260 000000
00050: 000000 000440 017030 005502 034001 033112 000000 031760
00060: 146554 000440 017360 031460 000000 000000 000040 007000
```

```
00070: 033760 000003 000000 000444 000000 000000 000000 000000
00100: SAME: TO 000200-1


*T RECORD 1732 (%3304, #6C4)
00000: 036000 060156 147253 000560 000000 017000 033760 146430
00010: 000440 017000 000000 031460 022156 000040 006000 101260
00020: 000000 000000 000440 017000 031460 033131 000000 120040
00030: 005000 033760 146502 000442 000000 017000 033760 146512
00040: 000441 017000 000000 033760 146360 000440 017000 031460
00050: 000000 000223 000040 006000 031460 022124 000000 000040
00060: 006000 031460 000243 000040 000000 006000 101260 000000
00070: 000440 017000 000000 017565 000000 000000 000000 000000
00100: SAME: TO 000200-1


*T RECORD 1733 (%3305, #6C5)
00000: 036000 060156 004344 000636 000000 034001 033130 031460
00010: 033141 120040 000000 005000 033760 146506 000442 017000
00020: 000000 033760 146516 000441 017000 033760 000000 146350
00030: 000440 017000 031460 000223 000000 000040 006000 031460
00040: 022124 000040 000000 006000 031460 000243 000040 006000
00050: 000000 101260 000000 000440 017000 031460 000000 000000
00060: 020040 007000 033462 033034 000000 000440 006000 033760
00070: 000003 000444 000000 017000 000000 000000 000000 000000
00100: SAME: TO 000200-1


*T RECORD 1734 (%3306, #6C6)
00000: 036000 060156 044114 000714 000000 031760 146307 000440
00010: 017300 031760 000000 001400 000440 017070 001564 146512
00020: 000000 000440 017340 153164 034001 033146 000000 033760
00030: 000000 000500 017000 031460 000000 033243 000040 006000
00040: 033461 000000 000000 000445 017000 001564 146516 000440
00050: 000000 017340 033760 000000 000500 017000 000000 031460
00060: 033243 000040 006000 033461 000000 000000 000443 017000
00070: 031760 146330 000000 000440 000000 000000 000000 000000
00100: SAME: TO 000200-1


*T RECORD 1735 (%3307, #6C7)
00000: 036000 060156 014346 000772 000000 017300 031460 000000
00010: 000040 017200 000000 033760 000377 000440 017000 030465
00020: 000000 003435 000440 006000 031260 000000 000000 000440
00030: 017170 113560 000020 000440 000000 017000 031460 033160
00040: 140040 005000 000000 135271 034001 033164 031760 146310
00050: 000000 000440 017300 031460 000000 000040 000000 017200
00060: 033760 000377 000440 017000 000000 030463 003435 000440
00070: 006000 031260 000000 000000 000000 000000 000000 000000
00100: SAME: TO 000200-1


*T RECORD 1736 (%3310, #6C8)
00000: 036000 060156 075546 001050 000000 000440 017170 113560
00010: 000020 000440 000000 017000 031460 033167 140040 005000
00020: 000000 033760 000017 000441 017000 033760 000000 000017
00030: 000442 017000 033760 000377 000000 000443 017000 001561
00040: 146310 000440 000000 017340 033760 000000 000505 017000
00050: 000000 001562 146330 000440 017340 003565 000000 000000
00060: 000500 017000 163712 034001 000000 033202 031460 033204
00070: 124040 005000 000000 033760 000000 000000 000000 000000
00100: SAME: TO 000200-1
```

374

```
*T RECORD 1737 (%3311, #6C9)
00000: 036000 060156 057567 001126 000000 177400 000440 017000
00010: 073460 000000 000000 000440 017000 035460 000006 000640
00020: 000000 017002 031760 146307 000440 017340 000000 033760
00030: 000000 000506 017000 001563 000000 025000 000440 017300
00040: 001566 000000 000000 000520 017300 031460 000000 000440
00050: 000000 017070 113563 000001 000443 017000 000000 113562
00060: 000001 000442 017000 031460 000000 033200 114040 005000
00070: 033760 000017 000000 000442 000000 000000 000000 000000
00100: SAME: TO 000200-1

*T RECORD 1738 (%3312, #6CA)
00000: 036000 060156 025356 001204 000000 017000 113561 000001
00010: 000441 017000 000000 055614 034001 033220 031460 033176
00020: 000000 114040 005000 031760 146307 000440 000000 017340
00030: 033760 000000 000506 017000 000000 111566 000400 000440
00040: 017070 031460 000000 005336 000040 006000 001660 024570
00050: 000000 000440 017300 031760 000001 000440 000000 017070
00060: 031464 000000 000440 017170 000000 031760 001400 000440
00070: 017170 031760 000000 025000 000000 000000 000000 000000
00100: SAME: TO 000200-1

*T RECORD 1739 (%3313, #6CB)
00000: 036000 060156 110250 001262 000000 000440 017030 001566
00010: 000000 000500 000000 017030 031460 000000 000040 017160
00020: 000000 031760 000400 000440 017170 031460 000000 000000
00030: 000040 037150 134742 034001 000000 033236 031760 001002
00040: 000440 017340 000000 031562 000000 000500 017070 031460
00050: 000000 000000 000040 037170 113564 000001 000000 000444
00060: 017000 033145 000000 014040 000000 003000 030760 000377
00070: 000440 017000 000000 031460 000000 000000 000000 000000
00100: SAME: TO 000200-1

*T RECORD 1740 (%3314, #6CC)
00000: 036000 060156 100607 001340 000000 003435 000040 006000
00010: 033461 000000 000000 000440 017000 033760 000144 000441
00020: 000000 017000 031460 003325 000040 006000 000000 031460
00030: 000000 000040 007000 033760 000000 146374 000440 017000
00040: 031460 021331 000000 000040 006000 033760 146360 000440
00050: 000000 017000 152114 034001 033254 031460 000000 021362
00060: 000040 006000 033760 146430 000000 000440 017000 031460
00070: 021331 000040 000000 006000 000000 000000 000000 000000
00100: SAME: TO 000200-1

*T RECORD 1741 (%3315, #6CD)
00000: 036000 060156 002510 001416 000000 033760 146366 000440
00010: 017000 031460 000000 021362 000040 006000 031460 021347
00020: 000000 000040 006000 101760 000000 000440 000000 017030
00030: 031760 146553 000440 017360 000000 041260 000000 000440
00040: 017030 031760 000000 146554 000440 017360 031760 135023
00050: 000000 000440 017360 031760 130477 000440 000000 017360
00060: 033760 074402 000440 017000 000000 001560 000054 000440
00070: 017300 053205 000000 012001 000000 000000 000000 000000
00100: SAME: TO 000200-1

*T RECORD 1742 (%3316, #6CE)
00000: 036000 060156 030035 001474 000000 033272 031760 052625
00010: 000440 017070 000000 033760 074476 000440 017000 001560
```

```
00020: 000000 000054 000440 017300 031760 000125 000000 000440
00030: 017070 031460 033052 000040 000000 016000 126170 000400
00040: 146307 002570 000000 151077 034000 146350 000002 000050
00050: 000000 000447 146476 030004 146500 030004 000000 177777
00060: 000001 000050 000447 146476 000000 030004 177777 000001
00070: 000116 000447 000000 146500 000000 000000 000000 000000
00100: SAME: TO 000200-1


*T RECORD 1743 (%3317, #6CF)
00000: 036000 060156 155574 001552 000000 030004 177777 000004
00010: 000202 000447 000000 146464 030004 022440 146502 146547
00020: 000000 146550 146466 030004 022440 146503 000000 146547
00030: 146550 146470 030004 022440 000000 146504 146547 146550
00040: 146472 030004 000000 022440 146505 146547 146550 177777
00050: 000000 000004 000446 000447 146464 030004 000000 022440
00060: 146506 146547 130300 021000 000000 146440 146550 146466
00070: 030004 022440 000000 146507 000000 000000 000000 000000
00100: SAME: TO 000200-1


*T RECORD 1744 (%3320, #6D0)
00000: 036000 060156 001515 001630 000000 146547 146550 146470
00010: 030004 022440 000000 146510 146547 146550 146472 030004
00020: 000000 022440 146511 146547 146550 177777 000000 020103
00030: 020040 020115 020040 020131 000000 020040 020102 020040
00040: 020101 046114 000000 041141 071545 046557 073145 020662
00050: 000000 021400 146512 000000 000000 000000 000000 000000
00060: 000144 000144 000144 000144 000000 000001 170060 001400
00070: 000000 000400 000000 000001 000000 000000 000000 000000
00100: SAME: TO 000200-1


*T RECORD 1745 (%3321, #6D1)
00000: 017400 060126 160442 001706 000000 170061 001400 000000
00010: 000400 000001 000000 170062 001400 000000 000400 000001
00020: 000000 170063 001400 000000 000400 177777 000000 000000
00030: 000144 000001 000001 000000 000000 000000 120011 000000
00040: SAME: TO 000200-1


*T RECORD 1746 (%3322, #6D2)
00000: 002000 120000 120000 000000 000000 000000 000000 000000
00010: SAME: TO 000200-1


*T RECORD 1747 (%3323, #6D3)
00000: 025000 020000 155331 077105 042115 051440 000727 000000
00010: SAME: TO 000020-1
00020: 000000 020105 042111 052056 046523 051507 051456 036071
00030: 030061 031060 032456 030462 031062 037040 020040 020040
00040: SAME: TO 000050-1
00050: 020040 020040 000000 000000 000000 000000 000000 000000
00060: SAME: TO 000200-1


*T RECORD 1748 (%3324, #6D4)
00000: 003400 040001 052623 077105 042115 051400 000000 000000
00010: SAME: TO 000200-1


*T RECORD 1749 (%3325, #6D5)
00000: 036000 060156 033154 000000 000000 000726 034001 033277
00010: 031760 147611 000000 000440 017300 021760 000000 000440
00020: 000000 017070 033760 147603 000444 017160 000000 033460
```

```
00030: 000000 000452 017340 001564 000000 000000 000500 017340
00040: 033760 000000 000000 000517 017000 033760 000577 000444
00050: 000000 017000 101760 146555 000440 017300 000000 041260
00060: 000000 000440 017070 101760 000000 000777 000440 017170
00070: 031464 000000 000000 000440 000000 000000 000000 000000
00100: SAME: TO 000200-1
```

*T RECORD 1750 (%3326, #6D6)
```
00000: 036000 060156 130225 000056 000000 017030 031760 146560
00010: 000440 017360 000000 031760 146562 000440 017300 031760
00020: 000000 000000 000440 017070 050071 034001 000000 033315
00030: 033760 146555 000440 017000 000000 031460 025200 000040
00040: 006000 033760 000000 000777 000445 017000 031477 000000
00050: 000000 000440 017030 031460 003616 000040 000000 006000
00060: 013464 000000 000444 017000 000000 033311 000000 014040
00070: 003000 001565 000000 146564 000000 000000 000000 000000
00100: SAME: TO 000200-1
```

*T RECORD 1751 (%3327, #6D7)
```
00000: 036000 060156 040714 000134 000000 000440 017340 033760
00010: 000000 000500 000000 017000 043560 000077 000440 017000
00020: 000000 031460 033335 020040 005000 033760 000000 177700
00030: 000442 017000 043562 000000 000000 000502 017000 001172
00040: 000000 000440 000000 017340 062731 034001 033333 001565
00050: 000000 146564 000440 017300 031562 000000 000000 000500
00060: 017070 013465 000000 000445 000000 017000 031460 033324
00070: 114040 005000 000000 031760 000000 000000 000000 000000
00100: SAME: TO 000200-1
```

*T RECORD 1752 (%3330, #6D8)
```
00000: 036000 060156 173574 000212 000000 146562 000440 017300
00010: 031760 100000 000000 000440 017070 033760 146555 000440
00020: 000000 017000 031460 025200 000040 006000 000000 031460
00030: 000000 000040 007000 001565 000000 146564 000440 017340
00040: 033760 000000 000000 000500 017000 043560 000077 000440
00050: 000000 017000 101472 000000 000440 017340 000000 033760
00060: 000000 000516 017140 025363 000000 034001 033351 121560
00070: 000000 000500 000000 017000 000000 000000 000000 000000
00100: SAME: TO 000200-1
```

*T RECORD 1753 (%3331, #6D9)
```
00000: 036000 060156 031242 000270 000000 013476 033356 020456
00010: 005000 031460 000000 033351 120040 005140 013465 000000
00020: 000000 000445 017000 033344 000000 014040 000000 003000
00030: 031760 147611 000440 017340 000000 101760 000000 000500
00040: 017000 031460 000000 033362 120040 005000 031464 000000
00050: 000000 000440 017070 031760 147612 000440 000000 017340
00060: 111565 000000 000500 017000 000000 031460 000000 040040
00070: 007000 031465 000000 000000 000000 000000 000000 000000
00100: SAME: TO 000200-1
```

*T RECORD 1754 (%3332, #6DA)
```
00000: 036000 060156 164035 000346 000000 000440 007070 031460
00010: 000000 000040 000000 007000 015675 034001 033367 101460
00020: 000000 000000 000440 017340 033760 000000 000000 000514
00030: 017140 033760 000000 000515 000000 017140 033760 000000
00040: 000512 017140 000000 033760 000000 000504 017140 033760
00050: 000000 000000 000513 017140 033760 000000 000000 000505
```

```
00060: 017000 101760 146555 000440 000000 017300 031473 000000
00070: 000440 017070 000000 033465 000000 000000 000000 000000
00100: SAME: TO 000200-1


*T RECORD 1755 (%3333, #6DB)
00000: 036000 060156 174407 000424 000000 000000 000446 017170
00010: 031472 000000 000000 000440 017170 031460 000000 000040
00020: 000000 017100 041260 000000 000440 017170 000000 103760
00030: 000000 000447 017000 127702 000000 034001 033405 033760
00040: 000077 000443 000000 017000 033760 146555 000440 017000
00050: 000000 031460 025200 000040 006000 021760 000000 146564
00060: 000440 017300 031460 000000 000000 000040 017140 041563
00070: 000000 000500 000000 017030 000000 000000 000000 000000
00100: SAME: TO 000200-1


*T RECORD 1756 (%3334, #6DC)
00000: 036000 060156 117264 000502 000000 121574 000000 000500
00010: 017000 031460 000000 033417 014040 005000 121575 000000
00020: 000000 000500 017000 031460 033426 040040 000000 005000
00030: 013466 000000 000446 017000 000000 031460 033411 120040
00040: 005000 013464 000000 000000 000444 017000 031460 033427
00050: 000000 020040 005000 137025 034001 033423 000000 031760
00060: 146560 000440 017340 101760 000000 000000 000500 017070
00070: 033465 033406 000000 000446 000000 000000 000000 000000
00100: SAME: TO 000200-1


*T RECORD 1757 (%3335, #6DD)
00000: 036000 060156 060140 000560 000000 016000 043260 000000
00010: 000447 017000 000000 031760 147574 000440 017300 031467
00020: 000000 000000 000440 007070 033760 000053 000000 000441
00030: 017000 001561 074476 000440 000000 017340 030760 000000
00040: 000500 017000 000000 040660 177477 000440 017000 030660
00050: 000000 000100 000440 017000 031260 000000 000000 000440
00060: 017070 031760 101416 000440 000000 017340 121561 000000
00070: 000500 017000 000000 032337 000000 000000 000000 000000
00100: SAME: TO 000200-1


*T RECORD 1758 (%3336, #6DE)
00000: 036000 060156 022513 000636 000000 010001 033441 031460
00010: 000000 120040 000000 007000 031760 101362 000440 017300
00020: 000000 001561 100001 000440 017070 031460 000000 000000
00030: 000040 007000 151515 003400 000000 146555 100026 000000
00040: 001000 000000 000000 000001 000000 146564 016370 004000
00050: 000000 147564 000041 100006 000000 001000 000000 000000
00060: 000600 000000 000000 051433 000000 007000 147575 000000
00070: 000001 040000 000000 000000 000000 000000 000000 000000
00100: SAME: TO 000200-1


*T RECORD 1759 (%3337, #6DF)
00000: 011000 060113 002261 000714 000000 000000 000000 033366
00010: 033366 033324 000000 033344 033366 033366 177777 177777
00020: 000000 054414 000000 000000 000000 000000 000000 000000
00030: SAME: TO 000200-1


*T RECORD 1760 (%3340, #6E0)
00000: 002000 120000 120000 000000 000000 000000 000000 000000
00010: SAME: TO 000200-1
```

```
*T RECORD 1761 (%3341, #6E1)
00000: 025000 020000 124204 077126 051104 041040 002346 000000
00010: SAME: TO 000020-1
00020: 000000 020126 044504 044517 020122 042501 042040 041101
00030: 041513 020074 034065 030065 030066 027061 032461 030476
00040: 020040 020040 020040 020040 020040 020040 020040 020040
00050: 020040 020040 000000 000000 000000 000000 000000 000000
00060: SAME: TO 000200-1

*T RECORD 1762 (%3342, #6E2)
00000: 003400 040001 051233 077126 051104 041000 000000 000000
00010: SAME: TO 000200-1

*T RECORD 1763 (%3343, #6E3)
00000: 036000 060156 124570 000000 000000 002345 034001 033445
00010: 031460 000000 000000 000440 017340 033760 000000 000501
00020: 000000 017140 033760 000000 000502 017140 000000 123562
00030: 000000 000503 017140 033760 000000 000000 000504 017140
00040: 121564 000000 000000 000500 017030 031760 147626 000440
00050: 000000 017300 101760 000000 000500 017070 000000 031464
00060: 000000 000440 017270 101463 000000 000000 000440 017270
00070: 031462 000000 000000 000440 000000 000000 000000 000000
00100: SAME: TO 000200-1

*T RECORD 1764 (%3344, #6E4)
00000: 036000 060156 055407 000056 000000 017270 031461 000000
00010: 000440 017270 000000 031760 030006 000440 017700 041260
00020: 000000 000000 014440 017470 076703 034001 000000 033463
00030: 033760 147622 000440 017000 000000 031460 033646 000040
00040: 006000 031460 000000 033472 000040 006000 033760 147613
00050: 000000 000440 017000 031460 002745 000040 000000 006000
00060: 031460 033515 000040 006000 000000 031460 000000 000040
00070: 007000 031760 000000 030006 000000 000000 000000 000000
00100: SAME: TO 000200-1

*T RECORD 1765 (%3345, #6E5)
00000: 036000 060156 150461 000134 000000 000440 017700 041260
00010: 000000 014440 000000 017470 033760 001000 000441 037150
00020: 000000 031760 001001 000440 017340 031561 000000 000000
00030: 000500 017070 031460 000000 000000 000040 037170 031460
00040: 000000 000440 000000 017340 053073 034001 033501 033760
00050: 000000 000000 000501 017000 031760 100007 000000 000440
00060: 017070 031460 033646 000040 000000 006000 031460 000000
00070: 000440 017300 000000 031461 000000 000000 000000 000000
00100: SAME: TO 000200-1

*T RECORD 1766 (%3346, #6E6)
00000: 036000 060156 173213 000212 000000 000000 000440 017070
00010: 033760 004000 000000 000441 037150 031760 001001 000440
00020: 000000 017340 031561 000000 000500 017070 000000 033760
00030: 000400 000441 017000 031760 000000 000145 000440 017340
00040: 031561 000000 000000 000500 017070 031460 000000 000040
00050: 000000 027170 031760 133756 000440 017340 000000 031760
00060: 147646 000440 017360 033476 000000 034001 033517 023760
00070: 147657 000440 000000 017000 000000 000000 000000 000000
00100: SAME: TO 000200-1

*T RECORD 1767 (%3347, #6E7)
```

```
00000: 036000 060156 017712 000270 000000 031460 016264 000040
00010: 006000 031760 000000 147623 000440 017340 033760 000000
00020: 000000 000500 017140 033760 000000 000501 000000 017140
00030: 033760 000000 000502 017140 000000 031760 147636 000440
00040: 017360 031760 000000 147644 000440 017360 031760 147656
00050: 000000 000440 017360 031461 000000 000440 000000 017270
00060: 031760 147642 000440 017360 000000 031760 147635 000440
00070: 017360 031462 000000 000000 000000 000000 000000 000000
00100: SAME: TO 000200-1


*T RECORD 1768 (%3350, #6E8)
00000: 036000 060156 005231 000346 000000 000440 017270 031760
00010: 147631 000440 000000 017360 050043 034001 033535 031760
00020: 000000 147643 000440 017360 031760 147651 000000 000440
00030: 017360 031760 147654 000440 000000 017360 031460 000000
00040: 000440 017270 000000 031760 147650 000440 017360 031760
00050: 000000 147641 000440 017360 031760 147630 000000 000440
00060: 017360 031760 147633 000440 000000 017360 033760 147627
00070: 000440 017000 000000 031460 000000 000000 000000 000000
00100: SAME: TO 000200-1


*T RECORD 1769 (%3351, #6E9)
00000: 036000 060156 014031 000424 000000 025554 000040 006000
00010: 033760 147637 000000 000440 017000 031460 002745 000040
00020: 000000 006000 033760 147647 000440 017000 000000 031460
00030: 025554 000040 006000 011223 000000 034001 033553 033760
00040: 147671 000440 000000 017000 031460 002745 000040 006000
00050: 000000 031460 000000 000040 007000 101460 000000 000000
00060: 000440 017340 033760 000000 000000 000513 017140 033760
00070: 000000 000514 000000 017140 000000 000000 000000 000000
00100: SAME: TO 000200-1


*T RECORD 1770 (%3352, #6EA)
00000: 036000 060156 113310 000502 000000 033760 000000 000515
00010: 017140 033760 000000 000000 000504 017140 033760 000000
00020: 000000 000507 017140 033760 000000 000510 000000 017140
00030: 033760 000000 000505 017140 000000 033760 000000 000506
00040: 017000 041564 000000 170000 003440 017034 033760 000000
00050: 000000 000501 017000 172054 034001 033571 000000 041564
00060: 007400 002440 017034 033760 000000 000000 000502 017000
00070: 041564 000360 000000 001440 000000 000000 000000 000000
00100: SAME: TO 000200-1


*T RECORD 1771 (%3353, #6EB)
00000: 036000 060156 162663 000560 000000 017034 033760 000000
00010: 000503 017000 000000 043564 000017 000444 017000 021760
00020: 000000 135326 000440 017300 033760 000077 000000 000451
00030: 017000 121173 000000 000451 000000 017000 121174 033614
00040: 120451 005000 000000 121175 033614 120451 005000 031460
00050: 000000 033614 120040 005000 041260 000005 000000 000640
00060: 017170 031760 000377 000440 000000 017170 031460 000000
00070: 000040 017200 000000 063732 000000 000000 000000 000000
00100: SAME: TO 000200-1


*T RECORD 1772 (%3354, #6EC)
00000: 036000 060156 107146 000636 000000 034001 033607 031460
00010: 000000 000040 000000 017260 031460 000000 000040 017200
00020: 000000 031460 000000 000040 017260 031460 000000 000000
```

```
00030: 000040 017200 031460 033624 000000 000040 016260 031461
00040: 000000 000440 000000 017170 031460 000000 000040 017160
00050: 000000 031462 000000 000440 017170 031460 000000 000000
00060: 000040 017160 031463 000000 000000 000440 017170 031460
00070: 000000 000040 000000 017160 000000 000000 000000 000000
00100: SAME: TO 000200-1

*T RECORD 1773 (%3355, #6ED)
00000: 036000 060156 167566 000714 000000 031464 000000 000440
00010: 017170 031460 000000 000000 000040 017160 031760 147622
00020: 000000 000440 017300 136107 034001 033625 000000 031760
00030: 100022 000440 017070 031465 000000 000000 000440 017170
00040: 031466 000000 000000 000440 017170 031467 000000 000440
00050: 000000 017170 031470 000000 000440 017170 000000 031760
00060: 147664 000440 017300 031473 000000 000000 000440 017070
00070: 031760 147666 000000 000440 000000 000000 000000 000000
00100: SAME: TO 000200-1

*T RECORD 1774 (%3356, #6EE)
00000: 036000 060156 030504 000772 000000 017300 031474 000000
00010: 000440 017070 000000 031475 020702 000440 006170 023760
00020: 000000 147664 000440 017000 031460 016264 000000 000040
00030: 006000 033760 147622 000440 000000 017000 031460 033472
00040: 000040 006000 000000 132345 006001 033643 031460 020742
00050: 000000 000040 006000 031460 033515 000040 000000 006000
00060: 031460 000000 000040 007000 000000 050302 033400 147613
00070: 100010 000000 000000 001000 000000 000000 000000 000000
00100: SAME: TO 000200-1

*T RECORD 1775 (%3357, #6EF)
00000: 036000 060156 064304 001050 000000 000000 000600 000000
00010: 000000 100016 000000 000000 000001 000000 000001 100026
00020: 000000 000000 000000 000100 000000 000000 000000 000001
00030: 000001 100021 100007 000000 000000 000001 000000 000001
00040: 000000 000000 000000 100023 000000 000000 001000 000000
00050: 000000 000000 000001 000001 000000 000000 000000 000000
00060: 000000 000000 000000 000000 000000 000000 000000 000004
00070: 100023 000000 000000 001000 000000 000000 000000 000000
00100: SAME: TO 000200-1

*T RECORD 1776 (%3360, #6F0)
00000: 036000 060156 053541 001126 000000 000000 000600 000000
00010: 000000 000015 000000 000017 054535 034001 033646 031460
00020: 000000 025732 000040 006000 031760 001007 000000 000440
00030: 017340 031760 000000 000500 000000 017000 031460 033655
00040: 020040 005000 000000 101760 000000 000440 017030 031760
00050: 000000 145607 000440 017360 031460 033660 000000 000040
00060: 016000 033760 000002 000440 000000 017000 001560 104516
00070: 000440 017340 000000 031460 000000 000000 000000 000000
00100: SAME: TO 000200-1

*T RECORD 1777 (%3361, #6F1)
00000: 036000 060156 146165 001204 000000 000000 000100 037330
00010: 031460 030672 000000 000040 006000 031460 003672 000040
00020: 000000 006000 031460 034047 000040 006000 000000 031460
00030: 007760 004040 011000 026606 000000 034001 033664 033760
00040: 002466 000400 000000 006300 033760 000000 000501 017140
00050: 000000 033760 000000 000502 017140 033760 000000 000000
```

```
00060: 000503 017140 033760 000000 000000 000504 017140 033760
00070: 000000 000505 000000 017000 000000 000000 000000 000000
00100: SAME: TO 000200-1


*T RECORD 1778 (%3362, #6F2)
00000: 036000 060156 162444 001262 000000 033760 040000 000455
00010: 017000 073475 000000 000000 000456 017000 031760 001007
00020: 000000 000440 017340 031760 000000 000500 000000 017000
00030: 001544 002000 120440 017300 000000 033465 000000 000446
00040: 017000 031460 000000 000000 000040 017040 031575 000000
00050: 000000 000500 017070 150314 034001 033702 000000 013466
00060: 000000 000446 017100 031460 000000 033700 140040 005000
00070: 033760 002000 000000 000446 000000 000000 000000 000000
00100: SAME: TO 000200-1


*T RECORD 1779 (%3363, #6F3)
00000: 036000 060156 037272 001340 000000 017000 021760 006000
00010: 000440 017300 000000 041260 000000 000440 017170 013466
00020: 000000 000000 000446 017000 031460 033706 000000 120040
00030: 005000 031760 144736 000440 000000 017300 021760 006000
00040: 000440 017070 000000 031760 002000 000440 017170 031760
00050: 000000 101364 000440 017340 031460 000000 000000 000100
00060: 015000 101760 000000 000440 000000 017070 031760 001000
00070: 000440 017300 000000 156770 000000 000000 000000 000000
00100: SAME: TO 000200-1


*T RECORD 1780 (%3364, #6F4)
00000: 036000 060156 067264 001416 000000 034001 033720 031760
00010: 000011 000440 000000 017070 031460 034047 000040 006000
00020: 000000 047561 003740 000446 017002 041561 000000 000036
00030: 001440 017035 033760 000000 000000 000507 017000 033760
00040: 012120 000450 000000 017000 111566 000100 000440 017000
00050: 000000 031460 033733 020040 005000 031466 000000 000000
00060: 002440 017034 033760 013160 000000 000450 017000 003570
00070: 000000 000510 000000 017000 000000 000000 000000 000000
00100: SAME: TO 000200-1


*T RECORD 1781 (%3365, #6F5)
00000: 036000 060156 121115 001474 000000 031760 041401 000440
00010: 017700 021760 000000 000000 014440 017470 031760 007733
00020: 000000 000440 017760 026053 034001 033736 000000 031470
00030: 000000 000440 017030 031760 000000 043000 014440 017760
00040: 031760 000042 000000 000440 017030 031760 043400 014440
00050: 000000 017760 031760 002044 000440 017030 000000 001566
00060: 000022 014440 017760 031760 000000 002041 014440 017570
00070: 033463 000000 000000 000453 000000 000000 000000 000000
00100: SAME: TO 000200-1


*T RECORD 1782 (%3366, #6F6)
00000: 036000 060156 175765 001552 000000 017000 113563 000400
00010: 000443 017000 000000 031460 033751 040040 005000 033760
00020: 000000 000400 000453 017000 043260 000000 000000 000457
00030: 017000 033462 000000 000452 000000 017000 031460 034052
00040: 000040 006000 000000 114042 034001 033754 021760 000000
00050: 000000 000500 017030 003572 000000 000504 000000 017000
00060: 033760 000020 000445 017000 000000 100760 000000 000440
00070: 017000 013464 000000 000000 000000 000000 000000 000000
00100: SAME: TO 000200-1
```

```
*T RECORD 1783 (%3367, #6F7)
00000: 036000 060156 034262 001630 000000 000451 017000 003173
00010: 000000 000451 000000 017000 001564 004000 000440 017340
00020: 000000 041576 000000 000500 017070 031460 000000 000000
00030: 000040 017140 031575 000000 000000 000500 017070 003165
00040: 000000 000444 000000 017000 121164 000000 000451 017000
00050: 000000 000240 033762 040440 005000 001564 000000 004000
00060: 000440 017340 137623 034001 000000 033772 041576 000000
00070: 000500 017070 000000 031760 000000 000000 000000 000000
00100: SAME: TO 000200-1

*T RECORD 1784 (%3370, #6F8)
00000: 036000 060156 022023 001706 000000 001000 000440 017300
00010: 031760 000002 000000 000440 017070 031460 034052 000040
00020: 000000 006000 003572 000000 000504 017000 000000 031460
00030: 034047 000040 006000 031460 000000 003672 000040 006000
00040: 031760 000076 000000 000440 017300 031466 000000 000440
00050: 000000 017070 031460 034056 000040 006000 000000 100760
00060: 000000 000440 017000 103472 000000 000000 000452 017000
00070: 103477 000000 000000 000457 000000 000000 000000 000000
00100: SAME: TO 000200-1

*T RECORD 1785 (%3371, #6F9)
00000: 036000 060156 167643 001764 000000 017000 121173 000000
00010: 000457 017000 000000 067151 034001 034010 031460 034013
00020: 000000 040040 005000 121577 000020 000440 000000 017000
00030: 031460 033762 140040 005000 000000 031460 034052 000040
00040: 006000 003573 000000 000000 000512 017000 001562 004000
00050: 000000 000440 017300 031460 000000 000040 000000 017040
00060: 041576 000000 000500 017070 000000 013472 000000 000452
00070: 017100 031460 000000 034016 000000 000000 000000 000000
00100: SAME: TO 000200-1

*T RECORD 1786 (%3372, #6FA)
00000: 036000 060156 043141 002042 000000 114040 005000 031760
00010: 001000 000440 000000 017300 031760 000002 000440 017070
00020: 000000 031460 034047 000040 006000 003173 000000 000000
00030: 000442 017000 166573 034001 000000 034026 031463 000000
00040: 000440 017000 000000 031460 033745 140040 005000 031460
00050: 000000 000000 000040 011000 031760 000000 000000 000400
00060: 017030 031760 101364 000440 000000 017360 031460 030735
00070: 000040 006000 000000 031760 000000 000000 000000 000000
00100: SAME: TO 000200-1

*T RECORD 1787 (%3373, #6FB)
00000: 036000 060156 173167 002120 000000 001007 000440 017340
00010: 031760 000000 000000 000500 017000 031460 034042 020040
00020: 000000 005000 041260 000000 000440 017030 000000 031760
00030: 145607 000440 017360 031460 000000 034045 000040 016000
00040: 033760 000002 000000 000440 017000 001560 104516 000440
00050: 000000 017340 165544 034001 034044 031460 000000 000000
00060: 000100 037320 031460 025763 000000 000040 006000 031460
00070: 000000 000040 000000 007000 000000 000000 000000 000000
00100: SAME: TO 000200-1

*T RECORD 1788 (%3374, #6FC)
00000: 036000 060156 034564 002176 000000 031760 001000 000440
```

```
00010: 017340 031760 000000 000000 000500 017000 034047 000000
00020: 000000 020040 003000 031760 001007 000440 000000 017340
00030: 031760 000000 000500 017000 000000 001740 147700 120440
00040: 017340 031460 000000 000000 000040 007000 001566 000004
00050: 000000 000440 017700 031162 000000 000447 000000 017030
00060: 001577 000000 014500 017470 000000 031260 000000 014440
00070: 017570 174677 000000 034001 000000 000000 000000 000000
00100: SAME: TO 000200-1

*T RECORD 1789 (%3375, #6FD)
00000: 036000 060156 011535 002254 000000 034062 031461 000000
00010: 000440 017030 000000 031460 000000 000100 015000 031460
00020: 000000 002466 000440 006300 033760 000000 000000 000501
00030: 017000 047561 077400 000441 000000 017002 001560 000003
00040: 000440 017340 000000 031561 000000 014500 017570 031460
00050: 000000 000000 000040 017140 031460 000000 000000 014040
00060: 017560 001566 000032 000440 000000 017760 031760 041401
00070: 000440 017700 000000 041260 000000 000000 000000 000000
00100: SAME: TO 000200-1

*T RECORD 1790 (%3376, #6FE)
00000: 011400 060114 116233 002332 000000 000000 014440 017470
00010: 031460 000000 000000 000040 011000 033760 000000 000401
00020: 000000 007000 071334 000000 000000 000000 000000 000000
00030: SAME: TO 000200-1

*T RECORD 1791 (%3377, #6FF)
00000: 002000 120000 120000 000000 000000 000000 000000 000000
00010: SAME: TO 000200-1

*T RECORD 1792 (%3400, #700)
00000: 025000 020000 123223 077101 051105 040440 001630 000000
00010: SAME: TO 000020-1
00020: 000000 020040 020040 050111 041524 052522 042440 040522
00030: 042501 020115 040516 040507 042515 042516 052040 036070
00040: 033460 030461 031056 030466 032071 037040 020040 020040
00050: 020040 020040 000000 000000 000000 000000 000000 000000
00060: SAME: TO 000200-1

*T RECORD 1793 (%3401, #701)
00000: 003400 040001 050607 077101 051105 040400 000000 000000
00010: SAME: TO 000200-1

*T RECORD 1794 (%3402, #702)
00000: 036000 060156 050120 000000 000000 001627 023400 147702
00010: 100026 000000 000000 000000 000000 000001 000000 150120
00020: 000000 100006 000000 000000 000000 000000 000000 147751
00030: 100007 000000 000000 000000 000000 000000 150011 100011
00040: 000000 000000 000000 000000 000000 150051 100016 100006
00050: 000000 000000 000000 000000 000001 000000 000000 000000
00060: 000000 000000 000000 000077 000000 000077 000000 010355
00070: 034001 034100 000000 031460 000000 000000 000000 000000
00100: SAME: TO 000200-1

*T RECORD 1795 (%3403, #703)
00000: 036000 060156 177047 000056 000000 025732 000040 006000
00010: 031760 145703 000000 000440 017340 033760 000000 000501
00020: 000000 017000 031460 034121 014040 005000 000000 111561
```

384

```
00030: 003000 000440 017000 031460 000000 000000 022440 017340
00040: 033760 000000 000000 000501 017000 043561 003741 000446
00050: 000000 017000 111566 000041 045440 017000 000000 034113
00060: 034113 040042 001000 031460 000000 034121 000040 016000
00070: 031561 000001 000000 000440 000000 000000 000000 000000
00100: SAME: TO 000200-1


*T RECORD 1796 (%3404, #704)
00000: 036000 060156 136752 000134 000000 017070 031460 000000
00010: 000040 017140 000000 033760 000000 000502 017140 150165
00020: 000000 034001 034116 033760 000000 000503 000000 017140
00030: 033760 000000 000504 017140 000000 033760 034164 000505
00040: 006000 031460 000000 025763 000040 006000 031460 000000
00050: 000000 000040 007000 031460 025732 000040 000000 006000
00060: 031760 145703 000440 017340 000000 033760 000000 000501
00070: 017000 111561 000000 003000 000000 000000 000000 000000
00100: SAME: TO 000200-1


*T RECORD 1797 (%3405, #705)
00000: 036000 060156 024005 000212 000000 000440 017000 031460
00010: 000000 022440 000000 017300 031460 002466 000040 006000
00020: 000000 033760 000000 000501 017000 111561 000000 000041
00030: 045440 017000 034135 034135 000000 040042 001000 067245
00040: 034001 034134 000000 031460 034162 000040 016000 031460
00050: 000000 034137 150040 005140 031460 000000 000000 000040
00060: 017140 033760 000000 000502 000000 017140 033760 000000
00070: 000503 017140 000000 033760 000000 000000 000000 000000
00100: SAME: TO 000200-1


*T RECORD 1798 (%3406, #706)
00000: 036000 060156 166272 000270 000000 000000 000504 017140
00010: 033760 000000 000000 000505 017140 033760 000000 000506
00020: 000000 017140 033760 000000 000507 017140 000000 033760
00030: 000000 000510 017140 031760 000000 147744 000440 017360
00040: 031470 000000 000000 000440 017270 031467 000000 000440
00050: 000000 017270 031466 000000 000440 017270 000000 155001
00060: 034001 034152 031465 000000 000000 000440 017270 031464
00070: 000000 000440 000000 017270 000000 000000 000000 000000
00100: SAME: TO 000200-1


*T RECORD 1799 (%3407, #707)
00000: 036000 060156 013363 000346 000000 031463 000000 000440
00010: 017270 031462 000000 000000 000440 017270 031760 100006
00020: 000000 000440 017270 031561 000001 000440 000000 017270
00030: 031460 034164 000040 006000 000000 033760 147733 000440
00040: 017000 031460 000000 002745 000040 006000 031460 034121
00050: 000000 000040 016000 031760 147702 000440 000000 017300
00060: 031760 100026 000440 017070 000000 031462 000000 000440
00070: 017170 031463 000000 000000 000000 000000 000000 000000
00100: SAME: TO 000200-1


*T RECORD 1800 (%3410, #708)
00000: 036000 060156 173421 000424 000000 000440 017170 131672
00010: 034001 034170 000000 031464 000000 000440 017170 101760
00020: 000000 000000 000440 017170 101760 147711 000000 000440
00030: 017300 031462 000000 000440 000000 017070 031463 000000
00040: 000440 017170 000000 031464 000000 000440 017170 101760
00050: 000000 147725 000440 017300 031462 000000 000000 000440
```

```
00060: 017070 031463 000000 000440 000000 017170 031464 000000
00070: 000440 017170 000000 101760 000000 000000 000000 000000
00100: SAME: TO 000200-1

*T RECORD 1801 (%3411, #709)
00000: 036000 060156 151102 000502 000000 147717 000440 017300
00010: 031462 000000 000000 000440 017070 031463 000000 000440
00020: 000000 017170 031464 000000 000440 017170 000000 071014
00030: 034001 034206 031760 147745 000000 000440 017340 033760
00040: 000000 000515 000000 017140 033760 000000 000516 017140
00050: 000000 033760 000000 000517 017140 033760 000000 000000
00060: 000513 017000 033473 000000 000000 000452 017000 031460
00070: 034220 054040 000000 005000 000000 000000 000000 000000
00100: SAME: TO 000200-1

*T RECORD 1802 (%3412, #70A)
00000: 036000 060156 146463 000560 000000 031472 000000 000440
00010: 017000 031460 000000 034220 020040 005000 043260 000000
00020: 000000 000453 017000 031760 147707 000440 000000 017300
00030: 041260 000000 000440 017070 000000 031760 147715 000440
00040: 017360 033760 000000 147702 000440 017000 176410 034001
00050: 000000 034224 031460 025200 000040 006000 000000 033760
00060: 147711 000440 017000 031460 000000 025314 050040 006000
00070: 111572 000006 000000 000440 000000 000000 000000 000000
00100: SAME: TO 000200-1

*T RECORD 1803 (%3413, #70B)
00000: 036000 060156 061351 000636 000000 017000 033760 147725
00010: 000040 017000 000000 031460 025314 020040 006000 033760
00020: 000000 147717 000440 017000 031472 000000 000000 000440
00030: 017000 031460 025314 120040 000000 006000 043260 000000
00040: 000446 017000 000000 033463 000000 000454 017000 103760
00050: 000000 000000 000447 017000 031760 147751 000000 000440
00060: 017300 031460 034332 050040 000000 006000 134176 034001
00070: 034242 033467 000000 000000 000000 000000 000000 000000
00100: SAME: TO 000200-1

*T RECORD 1804 (%3414, #70C)
00000: 036000 060156 106545 000714 000000 000451 017000 103760
00010: 000000 000447 000000 017000 031760 150011 000440 017300
00020: 000000 031472 000000 000440 017000 031460 000000 034332
00030: 120040 006000 103760 000000 000000 000450 017000 031473
00040: 000000 000440 000000 017000 031472 034253 120440 005000
00050: 000000 031460 034254 120040 005000 031460 000000 034321
00060: 120040 006000 043170 000000 000000 000447 017000 011472
00070: 000000 000440 000000 017000 000000 000000 000000 000000
00100: SAME: TO 000200-1

*T RECORD 1805 (%3415, #70D)
00000: 036000 060156 145447 000772 000000 031460 034262 020040
00010: 005000 111572 000000 000006 000440 017000 161646 034001
00020: 000000 034260 031460 034262 020040 005000 000000 043167
00030: 034272 000451 016000 033167 000000 000000 000451 017000
00040: 111572 000006 000000 000440 017000 031460 034272 120040
00050: 000000 005000 031760 150051 000440 017300 000000 031460
00060: 034332 000040 006000 073467 000000 000000 000447 017000
00070: 043567 000001 000000 000447 000000 000000 000000 000000
00100: SAME: TO 000200-1
```

```
*T RECORD 1806 (%3416, #70E)
00000: 036000 060156 010246 001050 000000 017000 043167 000000
00010: 000451 017000 000000 031471 000000 000440 017000 031460
00020: 000000 000000 122040 017000 031460 034347 000000 000040
00030: 006000 031460 034365 054040 000000 006000 014073 034001
00040: 034276 103466 000000 000000 000446 017000 013474 000000
00050: 000000 000454 017000 031460 034237 140040 000000 005000
00060: 031760 147715 000440 017300 000000 031760 100000 000440
00070: 017070 033760 000000 147711 000000 000000 000000 000000
00100: SAME: TO 000200-1

*T RECORD 1807 (%3417, #70F)
00000: 036000 060156 130403 001126 000000 000440 017000 031460
00010: 025314 000040 000000 006000 031760 147707 000440 017300
00020: 000000 031760 100000 000440 017070 033760 000000 147702
00030: 000440 017000 031460 025200 000000 000040 006000 013465
00040: 000000 000445 000000 017000 031460 000000 020040 007000
00050: 000000 031760 147714 000440 017340 013062 000000 034001
00060: 034314 101760 000000 000500 000000 017070 031760 147705
00070: 000440 017360 000000 031760 000000 000000 000000 000000
00100: SAME: TO 000200-1

*T RECORD 1808 (%3420, #710)
00000: 036000 060156 153316 001204 000000 147722 000440 017360
00010: 031760 147730 000000 000440 017360 031460 034220 000040
00020: 000000 016000 001566 150120 000440 017340 000000 033760
00030: 000077 000440 017000 043560 000000 000000 000500 017000
00040: 121160 000000 000000 000456 017000 121160 034330 014457
00050: 000000 005000 031460 034330 140040 005000 000000 043260
00060: 000000 000450 007000 103760 000000 000000 000450 017000
00070: 031460 000000 000000 000040 000000 000000 000000 000000
00100: SAME: TO 000200-1

*T RECORD 1809 (%3421, #711)
00000: 036000 060156 104040 001262 000000 007000 132705 034001
00010: 034332 031466 000000 000000 001440 017034 033760 000000
00020: 000000 000507 017000 043567 007777 000447 000000 017000
00030: 001567 000000 000520 017300 000000 043566 000017 000447
00040: 017000 121567 000000 000020 001440 017034 031460 000000
00050: 000000 000020 015000 031760 000000 003500 000000 017010
00060: 031460 000000 000040 017040 000000 031760 000000 000500
00070: 017034 031760 000000 000000 000000 000000 000000 000000
00100: SAME: TO 000200-1

*T RECORD 1810 (%3422, #712)
00000: 036000 060156 153262 001340 000000 000500 011000 003740
00010: 000000 014447 000000 017000 031760 000000 003400 007010
00020: 000000 031466 000000 001440 017034 014353 000000 034001
00030: 034350 033760 000000 000507 000000 017000 043567 007777
00040: 000447 017000 000000 001567 147751 000440 017300 031460
00050: 000000 000000 000020 015000 031760 000000 000000 003500
00060: 017010 031760 100000 000440 000000 017034 073760 000000
00070: 000507 011000 000000 031760 000000 000000 000000 000000
00100: SAME: TO 000200-1

*T RECORD 1811 (%3423, #713)
00000: 036000 060156 110545 001416 000000 000000 003400 017010
```

```
00010: 031460 000000 000000 000040 017040 041567 034364 154500
00020: 000000 005030 073467 000000 000447 017000 000000 031567
00030: 000000 000500 017030 031460 000000 000000 000040 007060
00040: 001566 150120 000000 000440 017340 023565 034001 034366
00050: 000000 033760 000300 000451 017000 041571 000000 000000
00060: 000500 017030 031575 000000 000000 000500 007070 101460
00070: 000000 000440 000000 017340 000000 000000 000000 000000
00100: SAME: TO 000200-1
```

*T RECORD 1812 (%3424, #714)
```
00000: 036000 060156 152263 001474 000000 033760 000000 000501
00010: 017140 033760 000000 000000 000502 017140 033760 000000
00020: 000000 000503 017140 031760 147750 000440 000000 017360
00030: 031463 000000 000440 017270 000000 031462 000000 000440
00040: 017270 031461 000000 000000 000440 007270 031760 146203
00050: 000000 000440 017300 101760 000000 000440 000000 017070
00060: 101460 000000 000440 017340 000000 052114 030001 034404
00070: 033760 000000 000000 000501 000000 000000 000000 000000
00100: SAME: TO 000200-1
```

*T RECORD 1813 (%3425, #715)
```
00000: 036000 060156 116257 001552 000000 017000 031760 145306
00010: 000040 017360 000000 031460 000000 020040 007000 033760
00020: 000000 000021 000440 017000 030760 002220 000000 000440
00030: 017000 031760 000002 000440 000000 017030 011461 000000
00040: 000440 017000 000000 031460 034416 020040 005000 030760
00050: 000000 001020 000440 017000 031760 000010 000000 000440
00060: 017030 031760 101410 000440 000000 017360 031460 030371
00070: 000040 016000 000000 152606 000000 000000 000000 000000
00100: SAME: TO 000200-1
```

*T RECORD 1814 (%3426, #716)
```
00000: 002000 120000 120000 000000 000000 000000 000000 000000
00010: SAME: TO 000200-1
```

*T RECORD 1815 (%3427, #717)
```
00000: 025000 020000 000472 077122 047524 052040 005752 000000
00010: SAME: TO 000020-1
00020: 000000 020040 020040 046511 041522 047440 051117 052101
00030: 052105 020040 020040 020074 034065 030063 031066 027060
00040: 034462 032476 020040 020040 020040 020040 020040 020040
00050: 020040 020040 000000 000000 000000 000000 000000 000000
00060: SAME: TO 000200-1
```

*T RECORD 1816 (%3430, #718)
```
00000: 003400 040001 060647 077122 047524 052000 000000 000000
00010: SAME: TO 000200-1
```

*T RECORD 1817 (%3431, #719)
```
00000: 036000 060156 077122 000000 000000 005751 003400 150111
00010: 000000 000000 000000 000000 000000 000000 000000 000000
00020: 000000 150111 021400 154220 000000 000000 000000 000000
00030: 000000 000000 000000 000000 000000 000000 000300 000400
00040: 000604 000000 000000 000000 000000 000000 000000 154462
00050: 000000 000000 000000 000000 000000 000000 000000 000000
00060: 000000 000000 154706 150120 000000 151120 151140 151160
00070: 134251 134204 000000 000000 000000 000000 000000 000000
00100: SAME: TO 000200-1
```

388

```
*T RECORD 1818 (%3432, #71A)
00000: 036000 060156 065153 000056 000000 000000 130465 174236
00010: 021400 154263 000000 000000 000000 000000 000000 000000
00020: 000000 000000 000000 000000 000300 000400 000000 000604
00030: 000000 000000 000000 000000 000000 000000 154472 000000
00040: SAME: TO 000050-1
00050: 000000 154677 152160 153160 153200 153220 000000 134374
00060: 134327 000000 000000 130466 000000 004751 034001 034420
00070: 031760 101411 000000 000440 000000 000000 000000 000000
00100: SAME: TO 000200-1

*T RECORD 1819 (%3433, #71B)
00000: 036000 060156 157760 000134 000000 017340 031760 000000
00010: 000500 017000 000000 031460 034433 014040 005000 033760
00020: 000000 154220 000457 017000 001577 000042 000000 000440
00030: 017340 031760 000000 000500 000000 017340 031760 000000
00040: 000500 017000 000000 041260 000000 000040 017070 034432
00050: 000000 035014 120040 002000 031460 034433 000000 000040
00060: 016000 031460 034451 000040 000000 006000 031760 101411
00070: 000440 017340 000000 031760 000000 000000 000000 000000
00100: SAME: TO 000200-1

*T RECORD 1820 (%3434, #71C)
00000: 036000 060156 107525 000212 000000 000000 000500 017000
00010: 031460 000000 000000 020040 007000 170337 034001 034436
00020: 000000 033760 154263 000457 017000 001577 000000 000042
00030: 000440 017340 031760 000000 000000 000500 017340 031760
00040: 000000 000500 000000 017000 041260 034447 020440 005070
00050: 000000 031760 154522 000440 017340 031460 000000 035607
00060: 000040 006000 031460 035014 000000 000040 006000 031460
00070: 034450 000040 000000 016000 000000 000000 000000 000000
00100: SAME: TO 000200-1

*T RECORD 1821 (%3435, #71D)
00000: 036000 060156 047055 000270 000000 031460 034451 000040
00010: 006000 031460 000000 000000 000040 007000 001577 000001
00020: 000000 000440 017340 031760 000000 000500 000000 017000
00030: 021760 000000 000040 017070 000000 173656 034001 034454
00040: 031460 034471 000000 120040 005000 001577 000031 000440
00050: 000000 017340 033760 002745 000500 006000 000000 031460
00060: 017603 000040 006000 003577 000000 000004 001441 017000
00070: 001577 000037 000000 000440 000000 000000 000000 000000
00100: SAME: TO 000200-1

*T RECORD 1822 (%3436, #71E)
00000: 036000 060156 023650 000346 000000 017340 033760 035404
00010: 000500 006000 000000 003577 000002 005441 017000 001577
00020: 000000 000036 000440 017340 033760 035404 000000 000500
00030: 006000 001577 000020 000440 000000 017340 033760 000000
00040: 000507 017340 000000 031460 034721 000040 006000 001577
00050: 000000 000033 000440 017340 153177 034001 000000 034472
00060: 103760 000000 000511 017000 000000 001577 000012 000440
00070: 017340 023760 000000 000000 000000 000000 000000 000000
00100: SAME: TO 000200-1

*T RECORD 1823 (%3437, #71F)
00000: 036000 060156 154532 000424 000000 000501 017000 101471
```

EP 0 455 351 A2

```
00010: 000000 000440 000000 017360 001577 000013 000440 017340
00020: 000000 023760 000000 000500 017000 031471 000000 000000
00030: 000440 017360 001577 000003 000000 000440 017340 001561
00040: 000000 000500 000000 017030 001571 000003 000440 017360
00050: 000000 001577 000005 000440 017340 001560 000000 000000
00060: 000500 017030 001571 000002 000000 000440 017360 001577
00070: 000036 000440 000000 017340 000000 000000 000000 000000
00100: SAME: TO 000200-1

*T RECORD 1824 (%3440, #720)
00000: 036000 060156 033656 000502 000000 121704 034001 034510
00010: 033760 000045 000000 000440 017000 001560 000000 000500
00020: 000000 017340 037760 000264 000440 017002 000000 033760
00030: 000000 000507 017000 031460 000000 034517 014040 005000
00040: 113160 000000 000000 000447 017000 031460 034515 114040
00050: 000000 005000 003160 000000 000447 017070 000000 033467
00060: 035427 000440 006000 001577 000000 000040 000440 017360
00070: 033467 035431 000000 000440 000000 000000 000000 000000
00100: SAME: TO 000200-1

*T RECORD 1825 (%3441, #721)
00000: 036000 060156 056351 000560 000000 006000 001577 000041
00010: 000440 017360 000000 001577 000003 000440 017340 035760
00020: 000000 000000 000510 017002 124245 034001 000000 034526
00030: 001577 000005 000440 017340 000000 035760 000000 000507
00040: 017002 033467 000000 035370 001440 006000 033260 000000
00050: 000000 000443 017000 033460 000000 005451 000000 017030
00060: 033467 035370 000440 006000 000000 123260 000000 000444
00070: 017000 033460 000000 000000 000000 000000 000000 000000
00100: SAME: TO 000200-1

*T RECORD 1826 (%3442, #722)
00000: 036000 060156 053671 000636 000000 005452 017030 033470
00010: 035370 000440 000000 006000 033260 000000 000445 017000
00020: 000000 033460 000000 000453 017030 033470 000000 035370
00030: 001440 006000 033260 000000 000000 000450 017000 033460
00040: 000000 000454 000000 017030 167157 034001 034544 001165
00050: 000000 000000 000443 017000 121163 000000 000000 025445
00060: 017000 033471 000000 116443 000000 017000 013153 000000
00070: 154443 017000 000000 003111 000000 000000 000000 000000
00100: SAME: TO 000200-1

*T RECORD 1827 (%3443, #723)
00000: 036000 060156 031221 000714 000000 000000 000453 017000
00010: 001577 000037 000000 000440 017340 033760 035561 000500
00020: 000000 006000 001170 000000 000444 017000 000000 121164
00030: 000000 025450 017000 001114 000000 000000 116452 017030
00040: 113760 000000 000000 000510 017000 013154 000000 154452
00050: 000000 017000 001577 000036 000440 017340 000000 033760
00060: 035566 000500 006000 042010 000000 034001 034562 001577
00070: 000034 000440 000000 017340 000000 000000 000000 000000
00100: SAME: TO 000200-1

*T RECORD 1828 (%3444, #724)
00000: 036000 060156 123047 000772 000000 033760 000000 000511
00010: 017000 001577 000000 000000 000440 017340 033760 000000
00020: 000000 000510 017000 007170 000000 000450 000000 017002
00030: 001570 154502 000440 017340 000000 033760 000000 000504
```

```
00040: 017140 033760 000000 000000 000505 017140 033760 000000
00050: 000000 000506 017140 033760 000000 000507 000000 017000
00060: 001577 000037 000440 017340 000000 033760 000000 000500
00070: 017000 031464 000000 035573 000000 000000 000000 000000
00100: SAME: TO 000200-1

*T RECORD 1829 (%3445, #725)
00000: 036000 060156 141512 001050 000000 000440 006300 033760
00010: 000000 000513 000000 017000 002747 034001 034600 001571
00020: 000000 000006 000440 017360 031465 035573 000000 000440
00030: 006300 033760 000000 000502 000000 017000 001577 000007
00040: 000440 017340 000000 113562 000000 000515 017000 031462
00050: 000000 000000 000440 017070 001577 000017 000000 000440
00060: 017340 113562 000000 000516 000000 017000 031462 000000
00070: 000440 017070 000000 031471 000000 000000 000000 000000
00100: SAME: TO 000200-1

*T RECORD 1830 (%3446, #726)
00000: 036000 060156 161063 001126 000000 000000 000440 017360
00010: 031466 035573 000000 000440 006300 001571 000002 000440
00020: 000000 017360 031467 035573 000440 006300 000000 001571
00030: 000004 000440 017360 016774 000000 034001 034616 123562
00040: 000000 000501 000000 017000 031460 035376 000040 006000
00050: 000000 001577 000036 000440 017340 033760 000000 000000
00060: 000500 017000 031464 035575 000000 000440 006300 033760
00070: 000000 000512 000000 017000 000000 000000 000000 000000
00100: SAME: TO 000200-1

*T RECORD 1831 (%3447, #727)
00000: 036000 060156 021760 001204 000000 001577 000006 000440
00010: 017340 113572 000000 000000 000515 017000 031472 000000
00020: 000000 000440 017070 001577 000016 000440 000000 017340
00030: 113572 000000 000516 017000 000000 031472 000000 000440
00040: 017070 041260 000000 000000 000440 017030 001571 000007
00050: 000000 000440 017360 124144 034001 034634 000000 031465
00060: 035575 000440 006300 123572 000000 000000 000503 017030
00070: 101471 000000 000000 000440 000000 000000 000000 000000
00100: SAME: TO 000200-1

*T RECORD 1832 (%3450, #728)
00000: 036000 060156 145124 001262 000000 017360 031466 035575
00010: 000440 006300 000000 123572 000000 000501 017030 001571
00020: 000000 000003 000440 017360 031460 035376 000000 000040
00030: 006000 043260 000000 000441 000000 017000 031467 035575
00040: 000440 006300 000000 121572 000000 000500 017030 001571
00050: 000000 000005 000440 017360 001577 000032 000000 000440
00060: 017340 023760 000000 000504 000000 017000 033473 035317
00070: 000440 006000 000000 132110 000000 000000 000000 000000
00100: SAME: TO 000200-1

*T RECORD 1833 (%3451, #729)
00000: 036000 060156 054071 001340 000000 034001 034652 001577
00010: 000033 000440 000000 017340 031760 000000 000500 017300
00020: 000000 101461 000000 000440 017070 001577 000000 000034
00030: 000440 017340 031760 000000 000000 000500 017340 033760
00040: 000000 000500 000000 017140 033760 000000 000501 017140
00050: 000000 033760 000000 000502 017140 033760 000000 000000
00060: 000503 017000 001577 000032 000000 000440 017340 023760
```

```
00070: 035317 000504 000000 006000 000000 000000 000000 000000
00100: SAME: TO 000200-1


*T RECORD 1834 (%3452, #72A)
00000: 036000 060156 034022 001416 000000 031760 170000 000440
00010: 017070 001577 000000 000034 000440 017340 033760 000000
00020: 000000 000511 017000 075406 034001 034670 000000 001571
00030: 000002 000440 017340 033760 000000 000000 000500 017140
00040: 033760 000000 000000 000501 017140 033760 000000 000502
00050: 000000 017140 033760 000000 000503 017000 000000 001577
00060: 000035 000440 017340 033760 000000 035317 000504 006000
00070: 001577 000034 000000 000440 000000 000000 000000 000000
00100: SAME: TO 000200-1


*T RECORD 1835 (%3453, #72B)
00000: 036000 060156 073375 001474 000000 017340 033760 000000
00010: 000511 017000 000000 001571 000004 000440 017340 033760
00020: 000000 000000 000500 017140 033760 000000 000000 000501
00030: 017140 033760 000000 000502 000000 017140 033760 000000
00040: 000503 017000 000000 055357 034001 034706 001577 000035
00050: 000000 000440 017340 033760 035317 000504 000000 006000
00060: 001577 000042 000440 017340 000000 031760 000000 000500
00070: 017300 031760 000000 000001 000000 000000 000000 000000
00100: SAME: TO 000200-1


*T RECORD 1836 (%3454, #72C)
00000: 036000 060156 127743 001552 000000 000440 017070 031760
00010: 144731 000440 000000 017360 031460 003701 000040 006000
00020: 000000 033760 000003 000441 017000 031760 000000 001000
00030: 000440 017340 041561 000000 000000 000500 017000 034716
00040: 000000 020040 000000 003000 033760 000000 000503 017140
00050: 000000 033760 000000 000504 017140 033760 000000 000000
00060: 000505 017000 101450 034001 000000 034724 033463 000000
00070: 000446 017000 000000 003164 000000 000000 000000 000000
00100: SAME: TO 000200-1


*T RECORD 1837 (%3455, #72D)
00000: 036000 060156 113301 001630 000000 000000 000446 017000
00010: 031760 154461 000000 000440 017340 033760 000000 000511
00020: 000000 017000 001567 000006 000440 017340 000000 033760
00030: 000000 000507 017140 033760 000000 007777 000453 017000
00040: 033760 003672 000000 000510 006000 031463 000000 000440
00050: 000000 017030 031760 000076 000440 017360 000000 001577
00060: 000004 000440 017340 031460 000000 035010 000040 006000
00070: 001563 000004 000000 014440 000000 000000 000000 000000
00100: SAME: TO 000200-1


*T RECORD 1838 (%3456, #72E)
00000: 036000 060156 002653 001706 000000 017760 031460 000000
00010: 000040 017140 000000 035374 034001 034742 003571 000000
00020: 000000 000707 017030 035467 000000 000447 000000 017002
00030: 001563 000005 014440 017760 000000 001577 000002 000440
00040: 017340 043260 000000 035010 000451 006000 001563 000006
00050: 000000 014440 017760 031460 000000 000040 000000 017140
00060: 003571 000000 000700 017030 000000 035460 000000 000440
00070: 017002 001563 000000 000007 000000 000000 000000 000000
00100: SAME: TO 000200-1
```

```
*T RECORD 1839 (%3457, #72F)
00000: 036000 060156 151023 001764 000000 014440 017760 001577
00010: 000013 000440 000000 017340 031460 035010 000040 006000
00020: 000000 001564 000004 014440 017760 031760 000000 001000
00030: 014440 017570 036734 034001 000000 034760 033760 000041
00040: 000441 017240 000000 031460 035010 000040 006000 001564
00050: 000000 000006 014440 017760 031760 000170 000000 014440
00060: 017570 031461 000000 000440 000000 017030 001563 000022
00070: 014440 017760 000000 031460 000000 000000 000000 000000
00100: SAME: TO 000200-1

*T RECORD 1840 (%3460, #730)
00000: 036000 060156 075434 002042 000000 000000 014040 017560
00010: 001561 002000 000000 000440 017030 001564 000022 014440
00020: 000000 017760 031460 000000 014040 017560 000000 031760
00030: 154461 000440 017340 001577 000000 000015 000440 017300
00040: 111567 000000 000000 000500 017070 031460 000000 000440
00050: 000000 017270 151345 034001 034776 101760 000000 100000
00060: 000440 017030 101760 041400 000000 014440 017760 031465
00070: 000000 000440 000000 017030 000000 000000 000000 000000
00100: SAME: TO 000200-1

*T RECORD 1841 (%3461, #731)
00000: 036000 060156 167160 002120 000000 031760 043000 014440
00010: 017760 031760 000000 000042 000440 017030 031760 043400
00020: 000000 014440 017760 001566 000032 000440 000000 017760
00030: 031760 041400 014440 017760 000000 031460 003701 000040
00040: 006000 031460 000000 000000 000040 007000 121571 000000
00050: 000000 000500 017030 041573 000000 000500 000000 017030
00060: 031570 000000 000500 017030 000000 031460 000000 000040
00070: 007000 100242 000000 034001 000000 000000 000000 000000
00100: SAME: TO 000200-1

*T RECORD 1842 (%3462, #732)
00000: 036000 060156 167605 002176 000000 035014 001577 000020
00010: 000440 017340 000000 033760 000000 000506 017000 001566
00020: 000000 000003 000440 017340 033760 000000 000000 000506
00030: 017140 033760 000000 000507 000000 017140 033760 000000
00040: 000503 017140 000000 033760 000000 000510 017140 033760
00050: 000000 000000 000511 017000 031466 000000 000000 000440
00060: 017030 031760 150111 000440 000000 017360 031467 000000
00070: 000440 017170 000000 031470 000000 000000 000000 000000
00100: SAME: TO 000200-1

*T RECORD 1843 (%3463, #733)
00000: 036000 060156 015560 002254 000000 000000 000440 017170
00010: 031471 000000 000000 000440 017170 031760 000041 000440
00020: 000000 017030 050113 034001 035032 001567 000000 000022
00030: 014440 017760 033760 002000 000000 014440 017560 001560
00040: 000000 000500 000000 017030 001566 000022 014440 017760
00050: 000000 043260 000000 014454 017560 001577 000000 000040
00060: 000440 017340 033760 000000 000000 000512 017000 001577
00070: 000041 000440 000000 017340 000000 000000 000000 000000
00100: SAME: TO 000200-1

*T RECORD 1844 (%3464, #734)
00000: 036000 060156 152452 002332 000000 033760 000000 000513
00010: 017000 101760 000000 100000 000440 017030 101760 041400
```

393

```
00020: 000000 014440 017760 031463 000000 000440 000000 017030
00030: 031760 043000 014440 017760 000000 031760 000042 000440
00040: 017030 035560 000000 034001 035050 031760 043400 014440
00050: 000000 017760 041260 000000 000440 017030 000000 031760
00060: 041400 014440 017760 001567 000000 000033 000440 017760
00070: 001577 000010 000000 000440 000000 000000 000000 000000
00100: SAME: TO 000200-1

*T RECORD 1845 (%3465, #735)
00000: 036000 060156 106344 002410 000000 017340 023760 000000
00010: 000505 017000 000000 001577 000006 000440 017340 003565
00020: 000000 000000 000505 017000 031760 150111 000000 000440
00030: 017340 033760 003701 000506 000000 006000 031760 150113
00040: 000440 017340 000000 033760 000000 000510 017140 033760
00050: 000000 000000 000511 017000 001577 000032 000000 000440
00060: 017340 040602 034001 035066 000000 001574 000000 000500
00070: 017340 033760 000000 000000 000000 000000 000000 000000
00100: SAME: TO 000200-1

*T RECORD 1846 (%3466, #736)
00000: 036000 060156 032741 002466 000000 000502 017000 111562
00010: 170000 000440 000000 017000 031460 035316 020040 005000
00020: 000000 001577 000011 000440 017340 001562 000000 000000
00030: 000500 017030 031460 035100 000000 014040 005000 033760
00040: 007777 000440 000000 017000 041560 000000 000500 017030
00050: 000000 031570 000000 000500 017030 001566 000000 000004
00060: 014440 017760 001577 000035 000000 000440 017340 001574
00070: 000000 000500 000000 017340 000000 000000 000000 000000
00100: SAME: TO 000200-1

*T RECORD 1847 (%3467, #737)
00000: 036000 060156 013360 002544 000000 121562 000000 000500
00010: 017030 024311 000000 034001 035104 103760 000000 000504
00020: 000000 017030 033474 000000 000443 017000 000000 001566
00030: 000005 014440 017760 103465 000000 000000 000445 017030
00040: 031460 035113 000000 014040 005000 041560 000000 000500
00050: 000000 017030 031571 000000 000500 017030 000000 001566
00060: 000006 014440 017760 101760 000000 000000 014440 017570
00070: 031466 000000 000000 000440 000000 000000 000000 000000
00100: SAME: TO 000200-1

*T RECORD 1848 (%3470, #738)
00000: 036000 060156 040161 002622 000000 017030 031760 000076
00010: 000440 017360 000000 001566 000032 000440 017760 001577
00020: 000000 000006 000440 017340 003563 000000 000000 005503
00030: 017000 074273 034001 035122 000000 033463 035370 000440
00040: 006000 123460 000000 000000 000446 017000 123260 000000
00050: 000000 000451 017000 003446 000000 024446 000000 017000
00060: 033462 035370 001440 006000 000000 003160 000000 000446
00070: 017000 001577 000000 000015 000000 000000 000000 000000
00100: SAME: TO 000200-1

*T RECORD 1849 (%3471, #739)
00000: 036000 060156 153550 002700 000000 000440 017340 003071
00010: 000000 000451 000000 017000 003546 000000 024506 017000
00020: 000000 035471 000000 005451 017002 033462 000000 035370
00030: 000440 006000 033260 000000 000000 000450 017000 033460
00040: 000000 000447 000000 017000 033463 035370 001440 006000
```

```
00050: 000000 161672 034001 035140 003160 000000 000000 000447
00060: 017000 001577 000014 000440 000000 017340 003070 000000
00070: 000450 017000 000000 003547 000000 000000 000000 000000
00100: SAME: TO 000200-1
```

*T RECORD 1850 (%3472, #73A)
```
00000: 036000 060156 110630 002756 000000 000000 024507 017000
00010: 035470 000000 000000 000450 017002 031760 154461 000440
00020: 000000 017340 033760 000000 000500 017000 000000 003160
00030: 000000 000446 017000 003560 000000 000000 000500 017000
00040: 001577 000005 000000 000440 017340 030467 000000 000440
00050: 000000 017000 003560 000000 015502 017000 000000 003560
00060: 035156 150500 005000 120467 000000 000000 000440 017000
00070: 132213 034001 000000 035156 000000 000000 000000 000000
00100: SAME: TO 000200-1
```

*T RECORD 1851 (%3473, #73B)
```
00000: 036000 060156 046277 003034 000000 031460 003435 000040
00010: 006000 031460 000000 035162 150040 005000 000062 000000
00020: 000000 000440 017000 120260 000000 000440 000000 017000
00030: 003066 000000 000446 017000 000000 003566 004000 000446
00040: 017000 033466 000000 000000 000440 017000 035460 000007
00050: 000000 000640 017002 033460 000000 000447 000000 017000
00060: 037460 000007 000640 017002 000000 113160 000000 000446
00070: 017000 003567 000000 000600 000000 000000 000000 000000
00100: SAME: TO 000200-1
```

*T RECORD 1852 (%3474, #73C)
```
00000: 036000 060156 017436 003112 000000 000447 017000 031760
00010: 150112 000440 000000 017340 033760 000000 000500 017000
00020: 000000 135464 034001 035174 001577 000000 000000 000440
00030: 017340 030760 000000 000500 000000 017000 011260 035202
00040: 020440 005000 000000 031460 035222 020040 005000 111660
00050: 000000 000002 000440 017000 035271 035245 000000 020040
00060: 001000 003172 000000 000450 000000 017000 013464 035205
00070: 114444 005000 000000 003162 000000 000000 000000 000000
00100: SAME: TO 000200-1
```

*T RECORD 1853 (%3475, #73D)
```
00000: 036000 060156 002347 003170 000000 000000 000046 017000
00010: 111566 001000 000000 021440 017000 003447 000000 114447
00020: 000000 017030 001560 000016 014440 017760 000000 043566
00030: 000777 000446 017000 043570 000000 077777 000450 017000
00040: 064612 034001 000000 035212 031760 047400 014440 017740
00050: 000000 031760 000000 000500 017000 031460 000000 035212
00060: 114040 005000 003173 000000 000000 000451 017000 003446
00070: 000000 014446 000000 017030 000000 000000 000000 000000
00100: SAME: TO 000200-1
```

*T RECORD 1854 (%3476, #73E)
```
00000: 036000 060156 024356 003246 000000 043571 077777 000451
00010: 017000 001560 000000 000054 014440 017760 035202 035315
00020: 000000 050040 001000 123473 000000 000453 000000 017000
00030: 003172 000000 000450 017000 000000 013464 035226 114444
00040: 005000 003162 000000 000000 000046 017000 111566 001000
00050: 000000 021440 017000 003447 000000 114447 000000 017030
00060: 041322 034001 035230 001560 000000 000016 014440 017760
00070: 043566 000777 000000 000446 000000 000000 000000 000000
```

```
00100: SAME: TO 000200-1

*T RECORD 1855 (%3477, #73F)
00000: 036000 060156 043745 003324 000000 017000 043570 077777
00010: 000450 017000 000000 031760 047400 014440 017740 031760
00020: 000000 000000 000500 017000 031460 035233 000000 114040
00030: 005000 003173 000000 000451 000000 017000 013446 000000
00040: 114446 017030 000000 013447 000000 114447 017000 043566
00050: 000000 000777 000446 017000 043571 077777 000000 000451
00060: 017000 001560 000054 014440 000000 017760 035223 035315
00070: 050040 001000 000000 123473 000000 000000 000000 000000
00100: SAME: TO 000200-1

*T RECORD 1856 (%3500, #740)
00000: 036000 060156 053615 003402 000000 000000 000453 017000
00010: 140617 034001 000000 035246 123472 000000 000452 017000
00020: 000000 003172 000000 000450 017000 031460 000000 035252
00030: 114040 005000 113162 000000 000000 000446 017000 013447
00040: 000000 114047 000000 017030 013464 035255 114444 005000
00050: 000000 003566 001000 000046 017000 043570 000000 077777
00060: 021450 017000 001560 000016 000000 014440 017760 031760
00070: 047400 014440 000000 017740 000000 000000 000000 000000
00100: SAME: TO 000200-1

*T RECORD 1857 (%3501, #741)
00000: 036000 060156 047763 003460 000000 031760 000000 000500
00010: 017000 031460 000000 035257 114040 005000 003173 000000
00020: 000000 000451 017000 013446 000000 114446 000000 017030
00030: 027231 034001 035264 013447 000000 000000 114447 017000
00040: 043566 000777 000000 000446 017000 043571 077777 000451
00050: 000000 017000 001560 000054 014440 017760 000000 035247
00060: 035315 050040 001000 123472 000000 000000 000452 017000
00070: 003172 000000 000000 000450 000000 000000 000000 000000
00100: SAME: TO 000200-1

*T RECORD 1858 (%3502, #742)
00000: 036000 060156 050230 003536 000000 017000 031460 035275
00010: 114040 005000 000000 113162 000000 000446 017000 013447
00020: 000000 000000 114047 017030 013464 035300 000000 114444
00030: 005000 003566 001000 000046 000000 017000 043570 077777
00040: 021450 017000 000000 001560 000016 014440 017760 036560
00050: 000000 034001 035302 031760 047400 014440 000000 017740
00060: 031760 000000 000500 017000 000000 031460 035302 114040
00070: 005000 003173 000000 000000 000000 000000 000000 000000
00100: SAME: TO 000200-1

*T RECORD 1859 (%3503, #743)
00000: 036000 060156 115722 003614 000000 000451 017000 003446
00010: 000000 014446 000000 017030 111566 001000 000440 017000
00020: 000000 003447 000000 114447 017000 043566 000000 000777
00030: 000446 017000 043571 077777 000000 000451 017000 001560
00040: 000054 014440 000000 017760 035272 035315 050040 001000
00050: 000000 103474 035060 000454 016000 031460 000000 000000
00060: 000040 007000 031464 000000 000000 000440 017030 173303
00070: 034001 035320 000000 031760 000000 000000 000000 000000
00100: SAME: TO 000200-1

*T RECORD 1860 (%3504, #744)
```

```
00000:  036000  060156  000463  003672  000000  150115  000440  017360
00010:  033462  000000  000000  000444  017000  113160  000000  000444
00020:  000000  017000  043260  035326  040452  005000  000000  003572
00030:  000004  000452  017000  031460  000000  035327  000040  016000
00040:  123464  000000  000000  000444  017000  033463  000000  000445
00050:  000000  017000  113161  000000  000445  017000  000000  031460
00060:  035334  040040  005000  003572  000000  000002  000452  017000
00070:  031460  035335  000000  000040  000000  000000  000000  000000
00100:  SAME:  TO  000200-1


*T RECORD 1861 (%3505, #745)
00000:  036000  060156  005600  003750  000000  016000  123465  000000
00010:  000445  017000  000000  121165  000000  000444  017000  125676
00020:  000000  034001  035336  023552  000007  040452  000000  017000
00030:  043572  000001  000451  017000  000000  031460  035343  021040
00040:  005000  033464  000000  000000  000446  017000  033465  035345
00050:  000000  000447  016000  033465  000000  000446  000000  017000
00060:  033464  000000  000447  017000  000000  037467  000000  151450
00070:  017002  113166  000000  000000  000000  000000  000000  000000
00100:  SAME:  TO  000200-1


*T RECORD 1862 (%3506, #746)
00000:  036000  060156  105451  004026  000000  000450  017000  121162
00010:  000000  000440  000000  017000  121163  035352  120441  005000
00020:  000000  031460  000000  020040  007000  003572  000000  110377
00030:  000453  017340  041570  010000  000000  000440  017000  010434
00040:  034001  035354  000000  035357  035360  022041  001000  001573
00050:  000000  000010  000440  017340  003561  035364  000000  000501
00060:  016000  003560  035364  000500  000000  016000  003560  000000
00070:  000500  017000  000000  001573  000000  000000  000000  000000
00100:  SAME:  TO  000200-1


*T RECORD 1863 (%3507, #747)
00000:  036000  060156  166572  004104  000000  000010  000440  017340
00010:  003561  000000  000000  000501  017000  113166  000000  000650
00020:  000000  017000  003167  000000  000650  017000  000000  031760
00030:  150115  000440  017340  001561  000000  000000  000500  017300
00040:  031460  035347  000000  000440  016070  001577  000040  000440
00050:  000000  017340  031460  035373  150040  005000  000000  042742
00060:  034001  035372  001577  000041  000000  000440  017340  030760
00070:  003435  000500  000000  006000  000000  000000  000000  000000
00100:  SAME:  TO  000200-1


*T RECORD 1864 (%3510, #748)
00000:  036000  060156  033313  004162  000000  036461  000000  000441
00010:  017001  033461  000000  000000  000440  007000  001560  000020
00020:  000000  000440  017300  031475  000000  000440  000000  017070
00030:  001560  000011  000440  017300  000000  031476  000000  000440
00040:  017070  001560  000000  000023  000440  017300  031461  000000
00050:  000000  000440  007070  043260  035602  150442  000000  006000
00060:  001560  000022  000440  017340  000000  031461  000000  000440
00070:  017360  001517  000000  000021  000000  000000  000000  000000
00100:  SAME:  TO  000200-1


*T RECORD 1865 (%3511, #749)
00000:  036000  060156  065610  004240  000000  000440  017360  111342
00010:  034001  035410  000000  033760  000000  000502  017000  001517
00020:  000000  000010  000440  017340  111562  000000  000000  000500
```

397

```
00030: 017030 001517 000006 000440 000000 017360 001560 000023
00040: 000440 017340 000000 033760 000000 000502 017000 101461
00050: 000000 000000 000440 017360 001517 000023 000000 000440
00060: 017360 001560 000013 000440 000000 017340 001517 000025
00070: 000440 017360 000000 001560 000000 000000 000000 000000
00100: SAME: TO 000200-1

*T RECORD 1866 (%3512, #74A)
00000: 036000 060156 141444 004316 000000 000014 000440 017340
00010: 001517 000027 000000 000440 017360 035462 000000 000440
00020: 000000 017002 001517 000016 000440 017300 000000 154232
00030: 002001 035426 121460 000000 000000 000440 007070 166636
00040: 034000 154326 000000 000000 001074 002170 003263 004356
00050: 000000 005450 006541 007631 010720 012006 000000 013072
00060: 014154 015235 016313 017367 000000 020441 021510 022554
00070: 023616 024654 000000 025707 000000 000000 000000 000000
00100: SAME: TO 000200-1

*T RECORD 1867 (%3513, #74B)
00000: 036000 060156 135035 004374 000000 026737 027763 031003
00010: 032020 033030 000000 034034 035034 036030 037016 040000
00020: 000000 040755 041724 042667 043624 044553 000000 045474
00030: 046410 047316 050215 051107 000000 051772 052646 053514
00040: 054352 055202 000000 056023 056635 057437 060232 061016
00050: 000000 061571 062335 063702 063616 064332 000000 043005
00060: 021400 154416 065036 065531 000000 066215 066670 067332
00070: 067763 070404 000000 071014 000000 000000 000000 000000
00100: SAME: TO 000200-1

*T RECORD 1868 (%3514, #74C)
00000: 036000 060156 156210 004452 000000 071414 072002 072357
00010: 072723 073256 000000 073577 074110 074407 074674 075150
00020: 000000 075413 075643 076063 076270 076464 000000 076646
00030: 077016 077155 077301 077414 000000 077514 077603 077660
00040: 077723 077754 000000 077773 077777 051412 034001 035427
00050: 000000 033760 000004 005443 017000 031460 000000 035432
00060: 000040 016000 033760 000020 000000 001443 017000 037760
00070: 000264 000441 000000 017002 000000 000000 000000 000000
00100: SAME: TO 000200-1

*T RECORD 1869 (%3515, #74D)
00000: 036000 060156 121602 004530 000000 113561 000132 000441
00010: 017000 121160 000000 000000 116441 017000 035437 035433
00020: 000000 040042 001000 043260 000000 000441 000000 017000
00030: 113161 000000 000440 017000 000000 035461 000000 000442
00040: 017002 041562 000000 000003 000440 017030 001577 000000
00050: 000000 000440 017360 041561 000010 000440 000000 017000
00060: 120560 000132 122440 017000 000000 067721 034001 035445
00070: 035450 035454 000000 050042 000000 000000 000000 000000
00100: SAME: TO 000200-1

*T RECORD 1870 (%3516, #74E)
00000: 036000 060156 055705 004606 000000 001000 001560 154326
00010: 000440 017340 000000 031460 035451 000040 016000 001660
00020: 000000 154326 000440 017340 041161 000000 000000 000443
00030: 017000 031460 000000 020040 000000 007000 111760 000000
00040: 000500 007030 000000 035446 035450 154040 001000 031760
00050: 000000 154461 000440 017340 033760 000000 000000 000503
```

```
00060: 017000 003563 000000 000502 000000 017000 031760 101411
00070: 000440 017340 000000 031760 000000 000000 000000 000000
00100: SAME: TO 000200-1


*T RECORD 1871 (%3517, #74F)
00000: 036000 060156 044250 004664 000000 000000 000500 017000
00010: 033760 154670 000000 121040 017000 162164 034001 035463
00020: 000000 031460 035502 014040 005000 031460 000000 002745
00030: 000040 006000 033760 154553 000000 000440 017000 031760
00040: 154242 000440 000000 017340 121563 000000 000500 017030
00050: 000000 001560 000007 000440 017360 031760 000000 154241
00060: 000440 017340 001560 000013 000000 000440 017360 031760
00070: 154244 000440 000000 017340 000000 000000 000000 000000
00100: SAME: TO 000200-1


*T RECORD 1872 (%3520, #750)
00000: 036000 060156 133041 004742 000000 001562 000000 000500
00010: 017030 001560 000000 000011 000440 017360 031760 154243
00020: 000000 000440 017340 001560 000015 000440 000000 017360
00030: 033760 154553 000440 017340 000000 114327 034001 035501
00040: 031460 035607 000000 000040 006000 031460 035532 150040
00050: 000000 005000 033760 154661 000440 017000 000000 031460
00060: 002745 000040 006000 033760 000000 154616 000440 017000
00070: 031760 154305 000000 000440 000000 000000 000000 000000
00100: SAME: TO 000200-1


*T RECORD 1873 (%3521, #751)
00000: 036000 060156 115617 005020 000000 017340 033760 000000
00010: 000501 017000 000000 113163 000000 000441 017000 001560
00020: 000000 000007 000440 017300 001561 140000 000000 000440
00030: 017070 031760 154304 000440 000000 017340 033760 000000
00040: 000501 017000 000000 001560 000013 000440 017300 001561
00050: 000000 160000 000440 017070 107371 034001 000000 035517
00060: 031760 154307 000440 017340 000000 001562 000000 000500
00070: 017030 001560 000000 000011 000000 000000 000000 000000
00100: SAME: TO 000200-1


*T RECORD 1874 (%3522, #752)
00000: 036000 060156 027705 005076 000000 000440 017360 031760
00010: 154306 000440 000000 017340 001560 000015 000440 017360
00020: 000000 031760 154522 000440 017340 031460 000000 035607
00030: 000040 006000 031760 154616 000000 000440 017340 031460
00040: 035607 000040 000000 006000 033760 154263 000457 017000
00050: 000000 031460 035536 000040 006000 031760 000000 101411
00060: 000440 017340 033760 154220 000000 000457 017000 031760
00070: 000000 000500 000000 017000 000000 000000 000000 000000
00100: SAME: TO 000200-1


*T RECORD 1875 (%3523, #753)
00000: 036000 060156 117520 005154 000000 051542 034001 035535
00010: 035536 000000 000000 014040 003000 001577 000037 000440
00020: 000000 017340 033760 035550 001500 006000 000000 001577
00030: 000036 005440 017340 033760 000000 035550 000500 006000
00040: 001577 000042 000000 000440 017340 031760 000000 000500
00050: 000000 017300 041260 000000 000440 017070 000000 001577
00060: 000001 000440 017360 043260 000000 035602 000442 006000
00070: 031460 000000 000000 000040 000000 000000 000000 000000
00100: SAME: TO 000200-1
```

399

```
*T RECORD 1876 (%3524, #754)
00000: 036000 060156 140630 005232 000000 007000 001517 000023
00010: 000440 017340 000000 001560 000023 000440 017360 001517
00020: 000000 000021 000440 017340 020550 034001 000000 035553
00030: 001560 000022 000440 017360 000000 001517 000027 000440
00040: 017340 001560 000000 000014 000440 017360 001517 000025
00050: 000000 000440 017340 001560 000013 000440 000000 017360
00060: 031460 000000 000040 007000 000000 001560 000041 000440
00070: 017300 031463 000000 000000 000000 000000 000000 000000
00100: SAME: TO 000200-1

*T RECORD 1877 (%3525, #755)
00000: 036000 060156 076055 005310 000000 000440 017070 121473
00010: 000000 000440 000000 017170 121463 000000 000440 017170
00020: 000000 031473 000000 000440 007170 001560 000000 000041
00030: 000440 017300 031470 000000 000000 000440 017070 031472
00040: 000000 000440 000000 017170 032556 034001 035571 121470
00050: 000000 000000 000440 017170 121472 000000 000000 000440
00060: 007170 003560 000041 000450 000000 017000 001570 000000
00070: 000520 007340 000000 003560 000000 000000 000000 000000
00100: SAME: TO 000200-1

*T RECORD 1878 (%3526, #756)
00000: 036000 060156 105014 005366 000000 000041 000450 017000
00010: 001570 000000 000000 000520 007340 031760 035602 000440
00020: 000000 017030 031460 017774 000040 006000 000000 031460
00030: 000000 000040 007000 001560 000000 000045 000440 017300
00040: 031462 000000 000000 000440 007070 031460 020065 000040
00050: 000000 006000 001560 000045 000440 017340 000000 033760
00060: 000000 000502 007000 102556 000000 022001 035607 103760
00070: 000000 000500 000000 017000 000000 000000 000000 000000
00100: SAME: TO 000200-1

*T RECORD 1879 (%3527, #757)
00000: 036000 060156 143612 005444 000000 031460 035613 020040
00010: 005140 011460 000000 000000 014440 017760 031460 035607
00020: 000000 000040 016140 031760 000000 000500 000000 017760
00030: 031460 000000 000040 017140 000000 031760 000076 000440
00040: 017360 031760 000000 000000 000500 017000 035616 000000
00050: 000000 020040 003040 001565 034000 154461 000000 000004
00060: 000200 000100 010120 000200 000000 000100 011100 000000
00070: 000000 001000 000000 000200 000000 000000 000000 000000
00100: SAME: TO 000200-1

*T RECORD 1880 (%3530, #758)
00000: 036000 060156 026445 005522 000000 016102 001000 000200
00010: 010162 140000 000000 140000 000000 000001 000002 000003
00020: 000000 000003 000000 000001 000002 000002 000000 000003
00030: 000000 000001 000001 000002 000000 000003 000000 041401
00040: 100001 043000 000000 004162 043400 000062 001004 140000
00050: 000000 001005 140040 001006 160000 001007 000000 160577
00060: 001022 002004 001023 002001 000000 041400 000000 040000
00070: 000000 177777 000000 160225 000000 000000 000000 000000
00100: SAME: TO 000200-1

*T RECORD 1881 (%3531, #759)
00000: 036000 060156 117266 005600 000000 034000 154551 001032
```

400

```
00010: 001000 041401 000000 100001 043000 011100 043400 000042
00020: 000000 000204 000000 000205 000774 000206 000000 000000
00030: 000207 000174 000104 000000 000000 000106 000604 000105
00040: 001000 000107 000000 000170 000222 002041 000223 002041
00050: 000000 000122 000041 000123 000041 041400 000000 000000
00060: 177777 000332 000200 041401 000000 100001 043000 010162
00070: 043400 000042 000000 001004 000000 000000 000000 000000
00100: SAME: TO 000200-1


*T RECORD 1882 (%3532, #75A)
00000: 036000 060156 121524 005656 000000 140000 001005 000774
00010: 001006 160000 000000 001007 000174 000204 000000 000206
00020: 000000 000604 000205 123145 026000 154641 000000 001000
00030: 000207 000170 000222 000041 000000 000223 000041 001022
00040: 002041 001023 000000 002041 041400 000000 177777 001232
00050: 000000 001000 100015 000000 000777 000000 000000 000577
00060: 000000 000000 100023 000000 000000 000777 000000 000577
00070: 000000 000000 000000 100023 000000 000000 000000 000000
00100: SAME: TO 000200-1


*T RECORD 1883 (%3533, #75B)
00000: 012400 060116 032604 005734 000000 000000 001000 000600
00010: 000200 000000 000000 000000 100022 000000 001000 000600
00020: 000000 000200 000000 000000 040510 000000 000000 000000
00030: SAME: TO 000200-1


*T RECORD 1884 (%3534, #75C)
00000: 002000 120000 120000 000000 000000 000000 000000 000000
00010: SAME: TO 000200-1


*T RECORD 1885 (%3535, #75D)
00000: 025000 020000 145445 077107 051103 046040 010051 000000
00010: SAME: TO 000020-1
00020: 000000 020107 051101 042101 052111 047516 020103 040514
00030: 041525 046101 052111 047516 051440 020040 036070 032460
00040: 031462 033056 030071 031065 037040 020040 020040 020040
00050: 020040 020040 000000 000000 000000 000000 000000 000000
00060: SAME: TO 000200-1


*T RECORD 1886 (%3536, #75E)
00000: 003400 040001 056213 077107 051103 046000 000000 000000
00010: SAME: TO 000200-1


*T RECORD 1887 (%3537, #75F)
00000: 036000 060156 036766 000000 000000 010050 026001 032766
00010: 031460 000000 000000 000440 017070 031461 000000 000440
00020: 000000 007170 031461 000000 000440 017340 000000 033760
00030: 000000 000502 017140 033760 000000 000000 000503 017000
00040: 031460 000000 000000 000440 017340 033760 000000 000500
00050: 000000 017140 033760 000000 000501 007000 000000 031460
00060: 000000 000040 017040 033760 000000 000000 000500 017140
00070: 033760 000000 000000 000501 000000 000000 000000 000000
00100: SAME: TO 000200-1


*T RECORD 1888 (%3540, #760)
00000: 036000 060156 133475 000056 000000 007000 127537 006000
00010: 146307 146653 000000 147253 147653 150253 153642 153666
00020: 000000 153712 153736 146453 146477 146523 000000 146547
```

```
00030: 116627 034001 033001 001560 000000 146307 000440 017340
00040: 033760 000000 000000 000516 017000 001560 146317 000440
00050: 000000 017340 033760 000000 000517 017000 000000 031760
00060: 154243 000440 017340 033760 000000 000000 000501 017000
00070: 001560 146313 000000 000440 000000 000000 000000 000000
00100: SAME: TO 000200-1
```

*T RECORD 1889 (%3541, #761)
```
00000: 036000 060156 147252 000134 000000 017340 033760 000000
00010: 000502 017000 000000 001161 000000 000442 017030 033760
00020: 000000 000000 000500 017000 001561 154102 000000 000440
00030: 017030 033760 000000 000501 000000 017000 031460 032770
00040: 000040 006000 000000 031460 015027 000040 006000 024713
00050: 000000 034001 033017 031760 146445 000440 000000 017300
00060: 031460 032766 000040 006000 000000 031760 154243 000440
00070: 017340 001577 000000 000000 000000 000000 000000 000000
00100: SAME: TO 000200-1
```

*T RECORD 1890 (%3542, #762)
```
00000: 036000 060156 020160 000212 000000 000500 017300 031460
00010: 032766 000040 000000 006000 001577 000000 000440 017030
00020: 000000 033760 000000 000500 017000 031760 000000 146573
00030: 000440 017030 033760 000000 000000 000501 017000 031460
00040: 032770 000040 000000 006000 031460 015112 000040 006000
00050: 000000 031760 146325 000440 017300 031460 000000 032766
00060: 000040 006000 001577 000002 000000 000440 017030 005343
00070: 034001 033035 000000 033760 000000 000000 000000 000000
00100: SAME: TO 000200-1
```

*T RECORD 1891 (%3543, #763)
```
00000: 036000 060156 134022 000270 000000 000000 000500 017000
00010: 031760 146575 000000 000440 017030 033760 000000 000501
00020: 000000 017000 031460 032770 000040 006000 000000 031460
00030: 015112 000040 006000 031760 000000 146323 000440 017300
00040: 031460 032766 000000 000040 006000 001577 000004 000440
00050: 000000 017030 033760 000000 000500 017000 000000 031760
00060: 146577 000440 017030 033760 000000 000000 000501 017000
00070: 031460 032770 000000 000040 000000 000000 000000 000000
00100: SAME: TO 000200-1
```

*T RECORD 1892 (%3544, #764)
```
00000: 036000 060156 060275 000346 000000 006000 031460 015112
00010: 000040 006000 000000 031760 146327 000440 017300 045472
00020: 000000 034001 033053 031460 032766 000040 000000 006000
00030: 001577 000012 000440 017030 000000 033760 000000 000500
00040: 017000 031760 000000 146601 000440 017030 033760 000000
00050: 000000 000501 017000 031460 032770 000040 000000 006000
00060: 031460 015112 000040 006000 000000 031760 146331 000440
00070: 017300 031460 000000 032766 000000 000000 000000 000000
00100: SAME: TO 000200-1
```

*T RECORD 1893 (%3545, #765)
```
00000: 036000 060156 044657 000424 000000 000040 006000 001577
00010: 000020 000440 000000 017030 033760 000000 000500 017000
00020: 000000 031760 146613 000440 017030 033760 000000 000000
00030: 000501 017000 031460 032770 000000 000040 006000 064460
00040: 034001 033071 000000 031460 015112 000040 006000 031760
00050: 000000 146355 000440 017300 031460 032766 000000 000040
```

```
00060: 006000 001577 000014 000440 000000 017030 033760 000000
00070: 000500 017000 000000 031760 000000 000000 000000 000000
00100: SAME: TO 000200-1


*T RECORD 1894 (%3546, #766)
00000: 036000 060156 171114 000502 000000 146603 000440 017030
00010: 033760 000000 000000 000501 017000 031460 032770 000040
00020: 000000 006000 031460 015112 000040 006000 000000 031760
00030: 146411 000440 017300 031460 000000 032766 000040 006000
00040: 031760 146633 000000 000440 017030 033760 000000 000500
00050: 000000 017000 031760 146411 000440 017030 000000 012312
00060: 034001 033107 033760 000000 000000 000501 017000 031460
00070: 032770 000040 000000 006000 000000 000000 000000 000000
00100: SAME: TO 000200-1


*T RECORD 1895 (%3547, #767)
00000: 036000 060156 166771 000560 000000 031460 015027 000040
00010: 006000 031760 000000 146411 000440 017300 031460 032766
00020: 000000 000040 006000 031760 146411 000440 000000 017300
00030: 031460 032776 .000040 006000 000000 031460 014747 000040
00040: 006000 031760 000000 146411 000440 017300 031460 000000
00050: 000000 000440 017070 111560 037700 000440 000000 017000
00060: 031460 033125 040040 005000 000000 031760 037700 000440
00070: 017030 031760 000000 146411 000000 000000 000000 000000
00100: SAME: TO 000200-1


*T RECORD 1896 (%3550, #768)
00000: 036000 060156 137614 000636 000000 000440 017360 127353
00010: 034001 033125 000000 001577 000016 000440 017030 033760
00020: 000000 000000 000500 017000 031760 146605 000000 000440
00030: 017030 033760 000000 000501 000000 017000 031460 032770
00040: 000040 006000 000000 031460 015112 000040 006000 031760
00050: 000000 146413 000440 017300 031460 032766 000000 000040
00060: 006000 031760 146413 000440 000000 017300 031460 032776
00070: 000040 006000 000000 031460 000000 000000 000000 000000
00100: SAME: TO 000200-1


*T RECORD 1897 (%3551, #769)
00000: 036000 060156 037414 000714 000000 014747 000040 006000
00010: 031760 146413 000000 000440 017300 031460 000000 000440
00020: 000000 017070 111460 000000 000440 017000 000000 121076
00030: 034001 033143 031460 033146 000000 114040 005000 041260
00040: 000000 000440 000000 017030 031760 146413 000440 017360
00050: 000000 001577 000006 000440 017030 033760 000000 000000
00060: 000500 017000 031760 146607 000000 000440 017030 033760
00070: 000000 000501 000000 017000 000000 000000 000000 000000
00100: SAME: TO 000200-1


*T RECORD 1898 (%3552, #76A)
00000: 036000 060156 127325 000772 000000 031460 032770 000040
00010: 006000 031460 000000 015112 000040 006000 031760 146357
00020: 000000 000440 017300 031460 032766 000040 000000 006000
00030: 001577 000010 000440 017030 000000 033760 000000 000500
00040: 017000 031760 000000 146611 000440 017030 133140 034001
00050: 000000 033161 033760 000000 000501 017000 000000 031460
00060: 032770 000040 006000 031460 000000 015112 000040 006000
00070: 031760 146361 000000 000440 000000 000000 000000 000000
00100: SAME: TO 000200-1
```

403

```
*T RECORD 1899 (%3553, #76B)
00000: 036000 060156 125537 001050 000000 017300 031460 032766
00010: 000040 006000 000000 031760 146361 000440 017030 033760
00020: 000000 000000 000500 017000 031760 146615 000000 000440
00030: 017030 033760 000000 000501 000000 017000 031460 032770
00040: 000040 006000 000000 031460 015024 000040 006000 031760
00050: 000000 146361 000440 017300 031460 032766 000000 000040
00060: 006000 031760 146623 000440 000000 017300 063720 034001
00070: 033177 031460 000000 032776 000000 000000 000000 000000
00100: SAME: TO 000200-1


*T RECORD 1900 (%3554, #76C)
00000: 036000 060156 075170 001126 000000 000040 006000 031760
00010: 146365 000440 000000 017300 031460 032766 000040 006000
00020: 000000 031760 146623 000440 017030 033760 000000 000000
00030: 000500 017000 031760 146623 000000 000440 017030 033760
00040: 000000 000501 000000 017000 031460 032770 000040 006000
00050: 000000 031460 015112 000040 006000 031760 000000 146367
00060: 000440 017300 031460 032766 000000 000040 006000 031760
00070: 146633 000440 000000 017030 000000 000000 000000 000000
00100: SAME: TO 000200-1


*T RECORD 1901 (%3555, #76D)
00000: 036000 060156 021213 001204 000000 033760 000000 000500
00010: 017000 031760 000000 146355 000440 017030 027246 034001
00020: 000000 033215 033760 000000 000501 017000 000000 031460
00030: 032770 000040 006000 031460 000000 015024 000040 006000
00040: 031760 146343 000000 000440 017300 031460 032766 000040
00050: 000000 006000 031760 146403 000440 017300 000000 031460
00060: 032766 000040 006000 031760 000000 146331 000440 017030
00070: 033760 000000 000000 000500 000000 000000 000000 000000
00100: SAME: TO 000200-1


*T RECORD 1902 (%3556, #76E)
00000: 036000 060156 105706 001262 000000 017000 031760 146615
00010: 000440 017030 000000 033760 000000 000501 017000 031460
00020: 000000 032770 000040 006000 031460 015024 000000 000040
00030: 006000 031760 146371 000440 000000 017300 063410 034001
00040: 033233 031460 000000 032766 000040 006000 031760 146371
00050: 000000 000440 017030 033760 000000 000500 000000 017000
00060: 031760 146617 000440 017030 000000 033760 000000 000501
00070: 017000 031460 000000 032770 000000 000000 000000 000000
00100: SAME: TO 000200-1


*T RECORD 1903 (%3557, #76F)
00000: 036000 060156 041270 001340 000000 000040 006000 031460
00010: 015112 000040 000000 006000 031760 146371 000440 017300
00020: 000000 031460 032766 000040 006000 031760 000000 146343
00030: 000440 017030 033760 000000 000000 000500 017000 031760
00040: 146371 000440 000000 017030 033760 000000 000501 017000
00050: 000000 031460 032770 000040 006000 061740 000000 034001
00060: 033251 031460 015027 000040 000000 006000 031760 146333
00070: 000440 017300 000000 031460 000000 000000 000000 000000
00100: SAME: TO 000200-1


*T RECORD 1904 (%3560, #770)
00000: 036000 060156 110700 001416 000000 032766 000040 006000
```

404

```
00010: 031760 146405 000000 000440 017300 031460 032766 000040
00020: 000000 006000 031760 146371 000440 017030 000000 033760
00030: 000000 000500 017000 031760 000000 146637 000440 017030
00040: 033760 000000 000000 000501 017000 031460 032770 000040
00050: 000000 006000 031460 015112 000040 006000 000000 031760
00060: 146337 000440 017300 031460 000000 032766 000040 006000
00070: 031760 146343 000000 000440 000000 000000 000000 000000
00100: SAME: TO 000200-1
```

*T RECORD 1905 (%3561, #771)
```
00000: 036000 060156 021363 001474 000000 017030 030107 034001
00010: 033267 033760 000000 000000 000500 017000 031760 146337
00020: 000000 000440 017030 033760 000000 000501 000000 017000
00030: 031460 032770 000040 006000 000000 031460 015027 000040
00040: 006000 031760 000000 146337 000440 017300 031460 032766
00050: 000000 000040 006000 031760 146337 000440 000000 017030
00060: 033760 000000 000500 017000 000000 031760 146327 000440
00070: 017030 033760 000000 000000 000000 000000 000000 000000
00100: SAME: TO 000200-1
```

*T RECORD 1906 (%3562, #772)
```
00000: 036000 060156 112066 001552 000000 000501 017000 031460
00010: 032770 000040 000000 006000 031460 015024 000040 006000
00020: 000000 031760 146337 000440 017300 043605 000000 034001
00030: 033305 031460 032766 000040 000000 006000 031760 146407
00040: 000440 017300 000000 031460 032766 000040 006000 031760
00050: 000000 146365 000440 017300 031460 032776 000000 000040
00060: 006000 031760 146373 000440 000000 017300 031460 032766
00070: 000040 006000 000000 031760 000000 000000 000000 000000
00100: SAME: TO 000200-1
```

*T RECORD 1907 (%3563, #773)
```
00000: 036000 060156 127746 001630 000000 146367 000440 017300
00010: 031460 032776 000000 000040 006000 031760 146375 000440
00020: 000000 017300 031460 032766 000040 006000 000000 031760
00030: 146631 000440 017300 031460 000000 032776 000040 006000
00040: 031460 034325 000000 000040 006000 124520 034001 033323
00050: 000000 031760 146335 000440 017300 031460 000000 032766
00060: 000040 006000 031760 146627 000000 000440 017300 031460
00070: 032776 000040 000000 006000 000000 000000 000000 000000
00100: SAME: TO 000200-1
```

*T RECORD 1908 (%3564, #774)
```
00000: 036000 060156 120170 001706 000000 031460 034325 000040
00010: 006000 031760 000000 146341 000440 017300 031460 032766
00020: 000000 000040 006000 031760 146623 000440 000000 017300
00030: 031460 032776 000040 006000 000000 031460 034274 000040
00040: 006000 031760 000000 146377 000440 017300 031460 032766
00050: 000000 000040 006000 023760 000000 000455 000000 017000
00060: 031460 033412 000040 006000 000000 151740 034001 033341
00070: 103760 000000 000000 000455 000000 000000 000000 000000
00100: SAME: TO 000200-1
```

*T RECORD 1909 (%3565, #775)
```
00000: 036000 060156 055762 001764 000000 017000 003576 000200
00010: 000456 017000 000000 031460 033412 000040 006000 031760
00020: 000000 146357 000440 017300 031460 032776 000000 000040
00030: 006000 031460 014747 000040 000000 006000 031760 146447
```

```
00040: 000440 017300 000000 031460 000000 000440 017070 033460
00050: 000000 000000 000452 017000 031460 000000 000000 020040
00060: 007000 123572 000177 000453 000000 017000 001176 000000
00070: 000453 017340 000000 033760 000000 000000 000000 000000
00100: SAME: TO 000200-1


*T RECORD 1910 (%3566, #776)
00000: 036000 060156 152003 002042 000000 014744 000500 006000
00010: 031760 146363 000000 000440 017300 177565 034001 033357
00020: 000000 031460 032766 000040 006000 043260 000000 000000
00030: 000455 017000 031760 146363 000000 000440 017030 033760
00040: 000000 000500 000000 017000 031760 146361 000440 017030
00050: 000000 033760 000000 000501 017000 031460 000000 032770
00060: 000040 006000 031460 015024 000000 000040 006000 031760
00070: 146363 000440 000000 017300 000000 000000 000000 000000
00100: SAME: TO 000200-1


*T RECORD 1911 (%3567, #777)
00000: 036000 060156 073173 002120 000000 031460 032766 000040
00010: 006000 031460 000000 014747 000040 006000 031460 000000
00020: 000000 000440 017000 031460 033375 114040 000000 005000
00030: 043260 000000 000440 017000 000000 101400 034001 033375
00040: 031760 146413 000000 000440 017340 121560 000000 000500
00050: 000000 017000 031460 033401 014040 005000 000000 033760
00060: 000000 000500 017000 031760 000000 146411 000440 017340
00070: 121560 000000 000000 000500 000000 000000 000000 000000
00100: SAME: TO 000200-1


*T RECORD 1912 (%3570, #778)
00000: 036000 060156 026653 002176 000000 017000 031460 033405
00010: 014040 005000 000000 031460 000000 000440 017030 001176
00020: 000000 000000 000455 017300 001573 000000 000000 000520
00030: 017360 121172 000000 000455 000000 017000 103475 000000
00040: 000055 017000 000000 033361 000000 020040 003000 033475
00050: 000000 014744 000440 006000 024430 034001 000000 033413
00060: 031760 146631 000440 017340 000000 033760 000000 000502
00070: 017140 033760 000000 015112 000000 000000 000000 000000
00100: SAME: TO 000200-1


*T RECORD 1913 (%3571, #779)
00000: 036000 060156 133770 002254 000000 000503 006000 031760
00010: 146373 000440 000000 017300 031460 032766 000040 006000
00020: 000000 033460 000000 000442 017000 033461 000000 015112
00030: 000443 006000 031760 146375 000000 000440 017300 031460
00040: 032766 000040 000000 006000 031760 146623 000440 017030
00050: 000000 033760 000000 000500 017000 031760 000000 146373
00060: 000440 017030 033760 000000 000000 000501 017000 031460
00070: 032770 000040 000000 006000 000000 000000 000000 000000
00100: SAME: TO 000200-1


*T RECORD 1914 (%3572, #77A)
00000: 036000 060156 060231 002332 000000 052476 034001 033431
00010: 031460 015024 000000 000040 006000 031760 146365 000440
00020: 000000 017300 031460 032766 000040 006000 000000 031760
00030: 146365 000440 017030 033760 000000 000000 000500 017000
00040: 031760 146365 000000 000440 017030 033760 000000 000501
00050: 000000 017000 031460 032770 000040 006000 000000 031460
00060: 015112 000040 006000 031760 000000 146367 000440 017300
```

406

```
00070: 031460 032766 000000 000040 000000 000000 000000 000000
00100: SAME: TO 000200-1


*T RECORD 1915 (%3573, #77B)
00000: 036000 060156 102522 002410 000000 006000 103475 000000
00010: 000442 017000 000000 037475 000000 000455 017002 001575
00020: 000000 146337 000440 017030 067161 034001 000000 033447
00030: 033760 000000 000500 017000 000000 001562 146323 000440
00040: 017030 033760 000000 000000 000501 017000 031460 032770
00050: 000000 000040 006000 031460 015024 000040 000000 006000
00060: 031760 146407 000440 017300 000000 031460 032766 000040
00070: 006000 037475 000000 000000 000000 000000 000000 000000
00100: SAME: TO 000200-1


*T RECORD 1916 (%3574, #77C)
00000: 036000 060156 007515 002466 000000 000440 017002 001560
00010: 146337 000440 000000 017300 031460 032776 000040 006000
00020: 000000 031760 146403 000440 017300 031460 000000 032766
00030: 000040 006000 031760 146337 000000 000440 017300 031460
00040: 032776 000040 000000 006000 024700 034001 033465 031760
00050: 000000 146405 000440 017300 031460 032766 000000 000040
00060: 006000 031760 146625 000440 000000 017300 031460 032776
00070: 000040 006000 000000 031460 000000 000000 000000 000000
00100: SAME: TO 000200-1


*T RECORD 1917 (%3575, #77D)
00000: 036000 060156 071202 002544 000000 034274 000040 006000
00010: 031760 146401 000000 000440 017300 031460 032766 000040
00020: 000000 006000 035475 000000 000455 017002 000000 031760
00030: 146377 000440 017030 033760 000000 000000 000500 017000
00040: 031760 146401 000000 000440 017030 033760 000000 000501
00050: 000000 017000 031460 032770 000040 006000 000000 031460
00060: 015027 000040 006000 104762 000000 034001 033503 031760
00070: 146353 000440 000000 017300 000000 000000 000000 000000
00100: SAME: TO 000200-1


*T RECORD 1918 (%3576, #77E)
00000: 036000 060156 123656 002622 000000 031460 032766 000040
00010: 006000 031760 000000 146353 000440 017030 033760 000000
00020: 000000 000500 017000 031760 146643 000440 000000 017030
00030: 033760 000000 000501 017000 000000 031460 032770 000040
00040: 006000 031460 000000 015140 000040 006000 031760 146353
00050: 000000 000440 017300 031460 032766 000040 000000 006000
00060: 031760 146353 000440 017030 000000 033760 000000 000500
00070: 017000 031760 000000 146375 000000 000000 000000 000000
00100: SAME: TO 000200-1


*T RECORD 1919 (%3577, #77F)
00000: 036000 060156 075513 002700 000000 000440 017030 033760
00010: 000000 000501 000000 017000 010025 034001 033521 031460
00020: 000000 032770 000040 006000 031460 015140 000000 000040
00030: 006000 031760 146353 000440 000000 017300 031460 032766
00040: 000040 006000 000000 031460 034550 000040 006000 031760
00050: 000000 146437 000440 017300 031460 032766 000000 000040
00060: 006000 031760 146437 000440 000000 017030 033760 000000
00070: 000500 017000 000000 031760 000000 000000 000000 000000
00100: SAME: TO 000200-1
```

407

```
*T RECORD 1920 (%3600, #780)
00000: 036000 060156 066643 002756 000000 146643 000440 017030
00010: 033760 000000 000000 000501 017000 031460 032770 000040
00020: 000000 006000 031460 015140 000040 006000 000000 031760
00030: 146351 000440 017300 105133 000000 034001 033537 031460
00040: 032766 000040 000000 006000 031760 146353 000440 017030
00050: 000000 033760 000000 000500 017000 031760 000000 146645
00060: 000440 017030 033760 000000 000000 000501 017000 031460
00070: 032770 000040 000000 006000 000000 000000 000000 000000
00100: SAME: TO 000200-1

*T RECORD 1921 (%3601, #781)
00000: 036000 060156 070625 003034 000000 031460 015112 000040
00010: 006000 031760 000000 146347 000440 017300 031460 032766
00020: 000000 000040 006000 031760 146347 000440 000000 017030
00030: 033760 000000 000500 017000 000000 031760 146365 000440
00040: 017030 033760 000000 000000 000501 017000 031460 032770
00050: 000000 000040 006000 062232 034001 033555 000000 031460
00060: 015112 000040 006000 031760 000000 146347 000440 017300
00070: 031460 032766 000000 000040 000000 000000 000000 000000
00100: SAME: TO 000200-1

*T RECORD 1922 (%3602, #782)
00000: 036000 060156 056702 003112 000000 006000 031760 146351
00010: 000440 017030 000000 033760 000000 000500 017000 031760
00020: 000000 146347 000440 017030 033760 000000 000000 000501
00030: 017000 031460 032770 000040 000000 006000 031460 015027
00040: 000040 006000 000000 031760 146351 000440 017300 031460
00050: 000000 032766 000040 006000 031460 034521 000000 000040
00060: 006000 031760 146435 000440 000000 017300 031460 032766
00070: 000040 006000 000000 104407 000000 000000 000000 000000
00100: SAME: TO 000200-1

*T RECORD 1923 (%3603, #783)
00000: 036000 060156 140762 003170 000000 034001 033573 031760
00010: 146645 000440 000000 017030 033760 000000 000500 017000
00020: 000000 031760 146367 000440 017030 033760 000000 000000
00030: 000501 017000 031460 032770 000000 000040 006000 031460
00040: 015112 000040 000000 006000 031760 146347 000440 017300
00050: 000000 031460 032766 000040 006000 031760 000000 146347
00060: 000440 017030 033760 000000 000000 000500 017000 031760
00070: 146375 000440 000000 017030 000000 000000 000000 000000
00100: SAME: TO 000200-1

*T RECORD 1924 (%3604, #784)
00000: 036000 060156 106313 003246 000000 033760 000000 000501
00010: 017000 031460 000000 032770 000040 006000 031460 015027
00020: 000000 000040 006000 044353 034001 033611 000000 031760
00030: 146347 000440 017300 031460 000000 032766 000040 006000
00040: 031760 146347 000000 000440 017030 033760 000000 000500
00050: 000000 017000 031760 146353 000440 017030 000000 033760
00060: 000000 000501 017000 031460 000000 032770 000040 006000
00070: 031460 015112 000000 000040 000000 000000 000000 000000
00100: SAME: TO 000200-1

*T RECORD 1925 (%3605, #785)
00000: 036000 060156 044047 003324 000000 006000 031760 146347
00010: 000440 017300 000000 031460 032766 000040 006000 031760
```

```
00020: 000000 146347 000440 017030 033760 000000 000000 000500
00030: 017000 031760 146435 000440 000000 017030 033760 000000
00040: 000501 017000 000000 007635 034001 033627 031460 032770
00050: 000000 000040 006000 031460 015027 000040 000000 006000
00060: 031760 146347 000440 017300 000000 031460 032766 000040
00070: 006000 031460 000000 034442 000000 000000 000000 000000
00100: SAME: TO 000200-1

*T RECORD 1926 (%3606, #786)
00000: 036000 060156 104625 003402 000000 000040 006000 031760
00010: 146433 000440 000000 017300 031460 032766 000040 006000
00020: 000000 031760 146375 000440 017030 033760 000000 000000
00030: 000500 017000 031760 146367 000000 000440 017030 033760
00040: 000000 000501 000000 017000 031460 032770 000040 006000
00050: 000000 031460 015027 000040 006000 031760 000000 146345
00060: 000440 017300 104357 034001 000000 033645 031460 032766
00070: 000040 006000 000000 031760 000000 000000 000000 000000
00100: SAME: TO 000200-1

*T RECORD 1927 (%3607, #787)
00000: 036000 060156 053627 003460 000000 146345 000440 017030
00010: 033760 000000 000000 000500 017000 031760 146353 000440
00020: 000000 017030 033760 000000 000501 017000 000000 031460
00030: 032770 000040 006000 031460 000000 015112 000040 006000
00040: 031760 146345 000000 000440 017300 031460 032766 000040
00050: 000000 006000 031760 146345 000440 017030 000000 033760
00060: 000000 000500 017000 031760 000000 146365 000440 017030
00070: 033760 000000 000000 000501 000000 000000 000000 000000
00100: SAME: TO 000200-1

*T RECORD 1928 (%3610, #788)
00000: 036000 060156 076253 003536 000000 017000 031460 032770
00010: 000040 006000 000000 062034 034001 033663 031460 015112
00020: 000000 000040 006000 031760 146345 000440 000000 017300
00030: 031460 032766 000040 006000 000000 031760 146345 000440
00040: 017030 033760 000000 000000 000500 017000 031760 146433
00050: 000000 000440 017030 033760 000000 000501 000000 017000
00060: 031460 032770 000040 006000 000000 031460 015024 000040
00070: 006000 031760 000000 146345 000000 000000 000000 000000
00100: SAME: TO 000200-1

*T RECORD 1929 (%3611, #789)
00000: 036000 060156 002656 003614 000000 000440 017300 031460
00010: 032766 000040 000000 006000 103475 000000 000455 017000
00020: 000000 007175 000001 000655 017002 033475 000000 014744
00030: 000440 006000 126570 034001 000000 033701 031760 146371
00040: 000440 017300 000000 031460 032766 000040 006000 031760
00050: 000000 146351 000440 017030 033760 000000 000000 000500
00060: 017000 031760 146643 000440 000000 017030 033760 000000
00070: 000501 017000 000000 031460 000000 000000 000000 000000
00100: SAME: TO 000200-1

*T RECORD 1930 (%3612, #78A)
00000: 036000 060156 175072 003672 000000 032770 000040 006000
00010: 031460 015112 000000 000040 006000 031760 146425 000440
00020: 000000 017300 031460 032766 000040 006000 000000 031760
00030: 146353 000440 017030 033760 000000 000000 000500 017000
00040: 031760 146645 000000 000440 017030 033760 000000 000501
```

```
00050:  000000 017000 010533 034001 033717 031460 000000 032770
00060:  000040 006000 031460 015112 000000 000040 006000 031760
00070:  146427 000440 000000 017300 000000 000000 000000 000000
00100:  SAME: TO 000200-1

*T RECORD 1931 (%3613, #78B)
00000:  036000 060156 044657 003750 000000 031460 032766 000040
00010:  006000 031760 000000 146371 000440 017030 033760 000000
00020:  000000 000500 017000 031760 146641 000440 000000 017030
00030:  033760 000000 000501 017000 000000 031460 032770 000040
00040:  006000 031460 000000 015027 000040 006000 031760 146431
00050:  000000 000440 017300 031460 032766 000040 000000 006000
00060:  031760 146431 000440 017030 000000 033760 000000 000500
00070:  017000 064170 000000 034001 000000 000000 000000 000000
00100:  SAME: TO 000200-1

*T RECORD 1932 (%3614, #78C)
00000:  036000 060156 012071 004026 000000 033735 031760 146427
00010:  000440 017030 000000 033760 000000 000501 017000 031460
00020:  000000 032770 000040 006000 031460 015112 000000 000040
00030:  006000 031760 146431 000440 000000 017300 031460 032766
00040:  000040 006000 000000 031760 146427 000440 017030 033760
00050:  000000 000000 000500 017000 031760 146427 000000 000440
00060:  017030 033760 000000 000501 000000 017000 031460 032770
00070:  000040 006000 000000 031460 000000 000000 000000 000000
00100:  SAME: TO 000200-1

*T RECORD 1933 (%3615, #78D)
00000:  036000 060156 050265 004104 000000 015024 000040 006000
00010:  031760 146415 000000 000440 017300 031460 032766 000040
00020:  000000 006000 064014 034001 033753 031760 000000 146431
00030:  000440 017030 033760 000000 000000 000500 017000 031760
00040:  146431 000440 000000 017030 033760 000000 000501 017000
00050:  000000 031460 032770 000040 006000 031460 000000 015024
00060:  000040 006000 031760 146417 000000 000440 017300 031460
00070:  032766 000040 000000 006000 000000 000000 000000 000000
00100:  SAME: TO 000200-1

*T RECORD 1934 (%3616, #78E)
00000:  036000 060156 167466 004162 000000 031760 146417 000440
00010:  017030 033760 000000 000000 000500 017000 031760 146425
00020:  000000 000440 017030 033760 000000 000501 000000 017000
00030:  031460 032770 000040 006000 000000 031460 015024 000040
00040:  006000 044440 000000 034001 033771 031760 146417 000440
00050:  000000 017300 031460 032766 000040 006000 000000 031760
00060:  146431 000440 017030 033760 000000 000000 000500 017000
00070:  031760 146425 000000 000440 000000 000000 000000 000000
00100:  SAME: TO 000200-1

*T RECORD 1935 (%3617, #78F)
00000:  036000 060156 072472 004240 000000 017030 033760 000000
00010:  000501 017000 000000 031460 032770 000040 006000 031460
00020:  000000 015024 000040 006000 031760 146421 000000 000440
00030:  017300 031460 032766 000040 000000 006000 031760 146371
00040:  000440 017030 000000 033760 000000 000500 017000 031760
00050:  000000 146421 000440 017030 033760 000000 000000 000501
00060:  017000 010213 034001 034007 000000 031460 032770 000040
00070:  006000 031460 000000 015112 000000 000000 000000 000000
```

```
00100: SAME: TO 000200-1

*T RECORD 1936 (%3620, #790)
00000: 036000 060156 077470 004316 000000 000040 006000 031760
00010: 146421 000440 000000 017300 031460 032766 000040 006000
00020: 000000 031760 146421 000440 017030 033760 000000 000000
00030: 000500 017000 031760 146347 000000 000440 017030 033760
00040: 000000 000501 000000 017000 031460 032770 000040 006000
00050: 000000 031460 015024 000040 006000 031760 000000 146421
00060: 000440 017300 031460 032766 000000 000040 006000 031760
00070: 146421 000440 000000 017030 000000 000000 000000 000000
00100: SAME: TO 000200-1

*T RECORD 1937 (%3621, #791)
00000: 036000 060156 042547 004374 000000 033760 000000 000500
00010: 017000 063765 000000 034001 034025 031760 146353 000440
00020: 000000 017030 033760 000000 000501 017000 000000 031460
00030: 032770 000040 006000 031460 000000 015024 000040 006000
00040: 031760 146421 000000 000440 017300 031460 032766 000040
00050: 000000 006000 031760 146421 000440 017030 000000 033760
00060: 000000 000500 017000 031760 000000 146351 000440 017030
00070: 033760 000000 000000 000501 000000 000000 000000 000000
00100: SAME: TO 000200-1

*T RECORD 1938 (%3622, #792)
00000: 036000 060156 101271 004452 000000 017000 031460 032770
00010: 000040 006000 000000 031460 015027 000040 006000 031760
00020: 000000 146421 000440 017300 031460 032766 000000 000040
00030: 006000 063655 034001 034043 000000 031760 146353 000440
00040: 017030 033760 000000 000000 000500 017000 031760 146371
00050: 000000 000440 017030 033760 000000 000501 000000 017000
00060: 031460 032770 000040 006000 000000 031460 015112 000040
00070: 006000 031760 000000 146423 000000 000000 000000 000000
00100: SAME: TO 000200-1

*T RECORD 1939 (%3623, #793)
00000: 036000 060156 061747 004530 000000 000440 017300 031460
00010: 032766 000040 000000 006000 031760 146423 000440 017030
00020: 000000 033760 000000 000500 017000 031760 000000 146351
00030: 000440 017030 033760 000000 000000 000501 017000 031460
00040: 032770 000040 000000 006000 031460 015024 000040 006000
00050: 000000 044434 034001 034061 031760 146423 000000 000440
00060: 017300 031460 032766 000040 000000 006000 031760 146423
00070: 000440 017030 000000 033760 000000 000000 000000 000000
00100: SAME: TO 000200-1

*T RECORD 1940 (%3624, #794)
00000: 036000 060156 152511 004606 000000 000000 000500 017000
00010: 031760 146371 000000 000440 017030 033760 000000 000501
00020: 000000 017000 031460 032770 000040 006000 000000 031460
00030: 015112 000040 006000 031760 000000 146423 000440 017300
00040: 031460 032766 000000 000040 006000 031760 146423 000440
00050: 000000 017030 033760 000000 000500 017000 000000 031760
00060: 146347 000440 017030 033760 000000 000000 000501 017000
00070: 010315 034001 000000 034077 000000 000000 000000 000000
00100: SAME: TO 000200-1

*T RECORD 1941 (%3625, #795)
```

411

```
00000: 036000 060156 013237 004664 000000 031460 032770 000040
00010: 006000 031460 000000 015024 000040 006000 031760 146423
00020: 000000 000440 017300 031460 032766 000040 000000 006000
00030: 031760 146423 000440 017030 000000 033760 000000 000500
00040: 017000 031760 000000 146371 000440 017030 033760 000000
00050: 000000 000501 017000 031460 032770 000040 000000 006000
00060: 031460 015112 000040 006000 000000 031760 146423 000440
00070: 017300 031460 000000 032766 000000 000000 000000 000000
00100: SAME: TO 000200-1


*T RECORD 1942 (%3626, #796)
00000: 036000 060156 046730 004742 000000 000040 006000 031760
00010: 146423 000440 000000 017030 033760 000000 000500 017000
00020: 000000 064107 034001 034115 031760 146345 000000 000440
00030: 017030 033760 000000 000501 000000 017000 031460 032770
00040: 000040 006000 000000 031460 015024 000040 006000 031760
00050: 000000 146423 000440 017300 031460 032766 000000 000040
00060: 006000 031760 146415 000440 000000 017030 033760 000000
00070: 000500 017000 000000 031760 000000 000000 000000 000000
00100: SAME: TO 000200-1


*T RECORD 1943 (%3627, #797)
00000: 036000 060156 050444 005020 000000 146621 000440 017030
00010: 033760 000000 000000 000501 017000 031460 032770 000040
00020: 000000 006000 031460 015112 000040 006000 000000 031760
00030: 146415 000440 017300 031460 000000 032766 000040 006000
00040: 064264 034001 000000 034133 031760 146415 000440 017030
00050: 000000 033760 000000 000500 017000 031760 000000 146621
00060: 000440 017030 033760 000000 000000 000501 017000 031460
00070: 032770 000040 000000 006000 000000 000000 000000 000000
00100: SAME: TO 000200-1


*T RECORD 1944 (%3630, #798)
00000: 036000 060156 057015 005076 000000 031460 015112 000040
00010: 006000 031760 000000 146415 000440 017300 031460 032766
00020: 000000 000040 006000 031760 146417 000440 000000 017030
00030: 033760 000000 000500 017000 000000 031760 146621 000440
00040: 017030 033760 000000 000000 000501 017000 031460 032770
00050: 000000 000040 006000 031460 015112 000040 000000 006000
00060: 045342 034001 034151 031760 000000 146417 000440 017300
00070: 031460 032766 000000 000040 000000 000000 000000 000000
00100: SAME: TO 000200-1


*T RECORD 1945 (%3631, #799)
00000: 036000 060156 115504 005154 000000 006000 031760 146417
00010: 000440 017030 000000 033760 000000 000500 017000 031760
00020: 000000 146621 000440 017030 033760 000000 000000 000501
00030: 017000 031460 032770 000040 000000 006000 031460 015112
00040: 000040 006000 000000 031760 146417 000440 017300 031460
00050: 000000 032766 000040 006000 031760 146421 000000 000440
00060: 017030 033760 000000 000500 000000 017000 031760 146621
00070: 000440 017030 000000 033760 000000 000000 000000 000000
00100: SAME: TO 000200-1


*T RECORD 1946 (%3632, #79A)
00000: 036000 060156 030070 005232 000000 000000 000501 017000
00010: 011071 034001 000000 034167 031460 032770 000040 006000
00020: 000000 031460 015112 000040 006000 031760 000000 146421
```

412

```
00030: 000440 017300 031460 032766 000000 000040 006000 031760
00040: 146421 000440 000000 017030 033760 000000 000500 017000
00050: 000000 031760 146621 000440 017030 033760 000000 000000
00060: 000501 017000 031460 032770 000000 000040 006000 031460
00070: 015112 000040 000000 006000 000000 000000 000000 000000
00100: SAME: TO 000200-1

*T RECORD 1947 (%3633, #79B)
00000: 036000 060156 030655 005310 000000 031760 146421 000440
00010: 017300 031460 000000 032766 000040 006000 031760 146423
00020: 000000 000440 017030 033760 000000 000500 000000 017000
00030: 064507 034001 034205 031760 000000 146621 000440 017030
00040: 033760 000000 000000 000501 017000 031460 032770 000040
00050: 000000 006000 031460 015112 000040 006000 000000 031760
00060: 146423 000440 017300 031460 000000 032766 000040 006000
00070: 031760 146423 000000 000440 000000 000000 000000 000000
00100: SAME: TO 000200-1

*T RECORD 1948 (%3634, #79C)
00000: 036000 060156 137271 005366 000000 017030 033760 000000
00010: 000500 017000 000000 031760 146621 000440 017030 033760
00020: 000000 000000 000501 017000 031460 032770 000000 000040
00030: 006000 031460 015112 000040 000000 006000 031760 146423
00040: 000440 017300 000000 031460 032766 000040 006000 064732
00050: 000000 034001 034223 031760 146415 000440 000000 017300
00060: 031460 032776 000040 006000 000000 031460 014776 000040
00070: 006000 033461 000000 000000 000000 000000 000000 000000
00100: SAME: TO 000200-1

*T RECORD 1949 (%3635, #79D)
00000: 036000 060156 020633 005444 000000 000451 017000 033460
00010: 000000 000450 000000 017000 031760 146417 000440 017300
00020: 000000 031460 032776 000040 006000 031460 000000 014776
00030: 000040 006000 033461 000000 000000 000447 017000 033460
00040: 000000 000446 000000 017000 031760 146421 000440 017300
00050: 000000 031460 032776 000040 006000 031460 000000 014776
00060: 000040 006000 033461 000000 000000 000445 017000 133272
00070: 034001 034241 000000 033460 000000 000000 000000 000000
00100: SAME: TO 000200-1

*T RECORD 1950 (%3636, #79E)
00000: 036000 060156 065546 005522 000000 000000 000444 017000
00010: 031760 146423 000000 000440 017300 031460 032776 000040
00020: 000000 006000 031460 014776 000040 006000 000000 043260
00030: 000000 000442 017000 030460 000000 000000 000440 017000
00040: 031460 034251 000000 114040 005000 040260 000000 000440
00050: 000000 017000 031760 146413 000440 017340 000000 121660
00060: 000000 000500 017000 031460 000000 034255 040040 005000
00070: 030760 000000 000000 000500 000000 000000 000000 000000
00100: SAME: TO 000200-1

*T RECORD 1951 (%3637, #79F)
00000: 036000 060156 010111 005600 000000 017000 031760 146411
00010: 000440 017340 000000 121660 000000 000500 017000 070540
00020: 000000 034001 034257 031460 034261 114040 000000 005000
00030: 030760 000000 000500 017000 000000 001176 000000 000442
00040: 017300 031260 000000 000000 000440 017070 003171 000000
00050: 000000 000447 017000 003150 000000 024446 000000 017000
```

```
00060:  003167 000000 000445 017000 000000 003146 000000 024444
00070:  017000 003165 000000 000000 000000 000000 000000 000000
00100:  SAME: TO 000200-1


*T RECORD 1952 (%3640, #7A0)
00000:  036000 060156 111103 005656 000000 000441 017000 003144
00010:  000000 024440 000000 017000 103462 000000 000442 017000
00020:  000000 111562 000200 000440 017000 034246 000000 000000
00030:  020040 003000 031760 146451 000000 000440 017300 037333
00040:  034001 034275 000000 031460 032766 000040 006000 031460
00050:  000000 034550 000040 006000 031760 146437 000000 000440
00060:  017300 031460 032766 000040 000000 006000 031460 034521
00070:  000040 006000 000000 031760 000000 000000 000000 000000
00100:  SAME: TO 000200-1


*T RECORD 1953 (%3641, #7A1)
00000:  036000 060156 057134 005734 000000 146435 000440 017300
00010:  031460 032766 000000 000040 006000 031760 146437 000440
00020:  000000 017030 033760 000000 000500 017000 000000 031760
00030:  146451 000440 017030 033760 000000 000000 000501 017000
00040:  031460 032770 000000 000040 006000 031460 015112 000040
00050:  000000 006000 031760 146451 000440 017300 000000 125230
00060:  034001 034313 031460 032766 000000 000040 006000 031760
00070:  146451 000440 000000 017030 000000 000000 000000 000000
00100:  SAME: TO 000200-1 .


*T RECORD 1954 (%3642, #7A2)
00000:  036000 060156 170536 006012 000000 033760 000000 000500
00010:  017000 031760 000000 146435 000440 017030 033760 000000
00020:  000000 000501 017000 031460 032770 000040 000000 006000
00030:  031460 015027 000040 006000 000000 031760 146445 000440
00040:  017300 031460 000000 032766 000040 006000 031460 000000
00050:  000000 000040 007000 031760 146451 000440 000000 017300
00060:  031460 032766 000040 006000 000000 031460 034550 000040
00070:  006000 031760 000000 146437 000000 000000 000000 000000
00100:  SAME: TO 000200-1


*T RECORD 1955 (%3643, #7A3)
00000:  036000 060156 151375 006070 000000 000440 017300 071450
00010:  034001 034331 000000 031460 032766 000040 006000 031460
00020:  000000 034521 000040 006000 031760 146435 000000 000440
00030:  017300 031460 032766 000040 000000 006000 031460 034442
00040:  000040 006000 000000 031760 146433 000440 017300 031460
00050:  000000 032766 000040 006000 031760 146451 000000 000440
00060:  017030 033760 000000 000500 000000 017000 031760 146437
00070:  000440 017030 000000 033760 000000 000000 000000 000000
00100:  SAME: TO 000200-1


*T RECORD 1956 (%3644, #7A4)
00000:  036000 060156 145361 006146 000000 000000 000501 017000
00010:  031460 032770 000000 000040 006000 031460 015112 000040
00020:  000000 006000 031760 146445 000440 017300 000000 125146
00030:  034001 034347 031460 032766 000000 000040 006000 031760
00040:  146445 000440 000000 017030 033760 000000 000500 017000
00050:  000000 031760 146643 000440 017030 033760 000000 000000
00060:  000501 017000 031460 032770 000000 000040 006000 031460
00070:  015140 000040 000000 006000 000000 000000 000000 000000
00100:  SAME: TO 000200-1
```

```
*T RECORD 1957 (%3645, #7A5)
00000: 036000 060156 030531 006224 000000 031760 146445 000440
00010: 017300 031460 000000 032766 000040 006000 031760 146445
00020: 000000 000440 017030 033760 000000 000500 000000 017000
00030: 031760 146435 000440 017030 000000 033760 000000 000501
00040: 017000 031460 000000 032770 000040 006000 063424 034001
00050: 000000 034365 031460 015027 000040 006000 000000 031760
00060: 146445 000440 017300 031460 000000 032766 000040 006000
00070: 031760 146445 000000 000440 000000 000000 000000 000000
00100: SAME: TO 000200-1

*T RECORD 1958 (%3646, #7A6)
00000: 036000 060156 012116 006302 000000 017030 033760 000000
00010: 000500 017000 000000 031760 146451 000440 017030 033760
00020: 000000 000000 000501 017000 031460 032770 000000 000040
00030: 006000 031460 015112 000040 000000 006000 031760 146451
00040: 000440 017300 000000 031460 032766 000040 006000 031760
00050: 000000 146451 000440 017030 033760 000000 000000 000500
00060: 017000 031760 146433 000440 000000 017030 012173 034001
00070: 034403 033760 000000 000000 000000 000000 000000 000000
00100: SAME: TO 000200-1

*T RECORD 1959 (%3647, #7A7)
00000: 036000 060156 170102 006360 000000 000501 017000 031460
00010: 032770 000040 000000 006000 031460 015024 000040 006000
00020: 000000 031760 146451 000440 017300 031460 000000 032766
00030: 000040 006000 031460 000000 000000 000040 007000 031760
00040: 146405 000440 000000 017030 033760 000000 000500 017000
00050: 000000 031760 146403 000440 017030 033760 000000 000000
00060: 000501 017000 031460 032770 000000 000040 006000 031460
00070: 015027 000040 000000 006000 000000 000000 000000 000000
00100: SAME: TO 000200-1

*T RECORD 1960 (%3650, #7A8)
00000: 036000 060156 052702 006436 000000 031760 146443 000440
00010: 017300 031460 000000 032766 000040 006000 105020 034001
00020: 000000 034421 031760 146443 000440 017030 000000 033760
00030: 000000 000500 017000 031760 000000 146643 000440 017030
00040: 033760 000000 000000 000501 017000 031460 032770 000040
00050: 000000 006000 031460 015140 000040 006000 000000 031760
00060: 146443 000440 017300 031460 000000 032766 000040 006000
00070: 031760 146443 000000 000440 000000 000000 000000 000000
00100: SAME: TO 000200-1

*T RECORD 1961 (%3651, #7A9)
00000: 036000 060156 140104 006514 000000 017030 033760 000000
00010: 000500 017000 000000 031760 146373 000440 017030 033760
00020: 000000 000000 000501 017000 031460 032770 000000 000040
00030: 006000 031460 015140 000040 000000 006000 045600 034001
00040: 034437 031760 000000 146443 000440 017300 031460 032766
00050: 000000 000040 006000 031460 000000 000040 000000 007000
00060: 031460 034550 000040 006000 000000 031760 146437 000440
00070: 017300 031460 000000 032766 000000 000000 000000 000000
00100: SAME: TO 000200-1

*T RECORD 1962 (%3652, #7AA)
00000: 036000 060156 116714 006572 000000 000040 006000 031460
```

```
00010: 034411 000040 000000 006000 031760 146443 000440 017300
00020: 000000 031460 032766 000040 006000 031760 000000 146367
00030: 000440 017030 033760 000000 000000 000500 017000 031760
00040: 146437 000440 000000 017030 033760 000000 000501 017000
00050: 000000 031460 032770 000040 006000 111066 000000 034001
00060: 034455 031460 015112 000040 000000 006000 031760 146445
00070: 000440 017300 000000 031460 000000 000000 000000 000000
00100: SAME: TO 000200-1


*T RECORD 1963 (%3653, #7AB)
00000: 036000 060156 077130 006650 000000 032766 000040 006000
00010: 031760 146445 000000 000440 017030 033760 000000 000500
00020: 000000 017000 031760 146643 000440 017030 000000 033760
00030: 000000 000501 017000 031460 000000 032770 000040 006000
00040: 031460 015140 000000 000040 006000 031760 146445 000440
00050: 000000 017300 031460 032766 000040 006000 000000 031760
00060: 146365 000440 017030 033760 000000 000000 000500 017000
00070: 031760 146443 000000 000440 000000 000000 000000 000000
00100: SAME: TO 000200-1


*T RECORD 1964 (%3654, #7AC)
00000: 036000 060156 100237 006726 000000 017030 012506 034001
00010: 034473 033760 000000 000000 000501 017000 031460 032770
00020: 000000 000040 006000 031460 015112 000040 000000 006000
00030: 031760 146433 000440 017300 000000 031460 032766 000040
00040: 006000 031760 000000 146433 000440 017030 033760 000000
00050: 000000 000500 017000 031760 146445 000440 000000 017030
00060: 033760 000000 000501 017000 000000 031460 032770 000040
00070: 006000 031460 000000 015024 000000 000000 000000 000000
00100: SAME: TO 000200-1


*T RECORD 1965 (%3655, #7AD)
00000: 036000 060156 071175 007004 000000 000040 006000 031760
00010: 146433 000440 000000 017300 031460 032766 000040 006000
00020: 000000 031760 146433 000440 017030 064620 000000 034001
00030: 034511 033760 000000 000500 000000 017000 031760 146407
00040: 000440 017030 000000 033760 000000 000501 017000 031460
00050: 000000 032770 000040 006000 031460 015024 000000 000040
00060: 006000 031760 146433 000440 000000 017300 031460 032766
00070: 000040 006000 000000 031460 000000 000000 000000 000000
00100: SAME: TO 000200-1


*T RECORD 1966 (%3656, #7AE)
00000: 036000 060156 142741 007062 000000 000000 000040 007000
00010: 031460 034550 000000 000040 006000 031760 146437 000440
00020: 000000 017300 031460 032766 000040 006000 000000 031460
00030: 034411 000040 006000 031760 000000 146443 000440 017300
00040: 031460 032766 000000 000040 006000 145605 034001 034527
00050: 000000 031760 146365 000440 017030 033760 000000 000000
00060: 000500 017000 031760 146437 000000 000440 017030 033760
00070: 000000 000501 000000 017000 000000 000000 000000 000000
00100: SAME: TO 000200-1


*T RECORD 1967 (%3657, #7AF)
00000: 036000 060156 047741 007140 000000 031460 032770 000040
00010: 006000 031460 000000 015112 000040 006000 031760 146435
00020: 000000 000440 017300 031460 032766 000040 000000 006000
00030: 031760 146435 000440 017030 000000 033760 000000 000500
```

416

```
00040: 017000 031760 000000 146443 000440 017030 033760 000000
00050: 000000 000501 017000 031460 032770 000040 000000 006000
00060: 031460 015024 000040 006000 000000 045316 034001 034545
00070: 031760 146435 000000 000440 000000 000000 000000 000000
00100: SAME: TO 000200-1

*T RECORD 1968 (%3660, #7B0)
00000: 036000 060156 170043 007216 000000 017300 031460 032766
00010: 000040 006000 000000 031460 000000 000040 007000 031760
00020: 000000 146405 000440 017030 033760 000000 000000 000500
00030: 017000 031760 146403 000440 000000 017030 033760 000000
00040: 000501 017000 000000 031460 032770 000040 006000 031460
00050: 000000 015024 000040 006000 031760 146437 000000 000440
00060: 017300 031460 032766 000040 000000 006000 031760 146437
00070: 000440 017030 000000 033760 000000 000000 000000 000000
00100: SAME: TO 000200-1

*T RECORD 1969 (%3661, #7B1)
00000: 036000 060156 143441 007274 000000 000000 000500 017000
00010: 031760 146407 000000 000440 017030 176050 034001 034563
00020: 000000 033760 000000 000501 017000 031460 000000 032770
00030: 000040 006000 031460 015027 000000 000040 006000 031760
00040: 146437 000440 000000 017300 031460 032766 000040 006000
00050: 000000 031760 146437 000440 017030 033760 000000 000000
00060: 000500 017000 031760 146407 000000 000440 017030 033760
00070: 000000 000501 000000 017000 000000 000000 000000 000000
00100: SAME: TO 000200-1

*T RECORD 1970 (%3662, #7B2)
00000: 036000 060156 067474 007352 000000 031460 032770 000040
00010: 006000 031460 000000 015027 000040 006000 031760 146437
00020: 000000 000440 017300 031460 032766 000040 000000 006000
00030: 031760 146437 000440 017030 000000 064612 034001 034601
00040: 033760 000000 000000 000500 017000 031760 146375 000440
00050: 000000 017030 033760 000000 000501 017000 000000 031460
00060: 032770 000040 006000 031460 000000 015140 000040 006000
00070: 031760 146437 000000 000440 000000 000000 000000 000000
00100: SAME: TO 000200-1

*T RECORD 1971 (%3663, #7B3)
00000: 036000 060156 052433 007430 000000 017300 031460 032766
00010: 000040 006000 000000 031460 000000 000040 007000 033760
00020: 000000 146453 000456 017000 033760 153642 000000 000457
00030: 017000 031460 034625 000040 000000 006000 033760 146477
00040: 000456 017000 000000 033760 153666 000457 017000 031460
00050: 000000 034625 000040 006000 043212 034001 000000 034617
00060: 033760 146523 000456 017000 000000 033760 153712 000457
00070: 017000 031460 000000 034625 000000 000000 000000 000000
00100: SAME: TO 000200-1

*T RECORD 1972 (%3664, #7B4)
00000: 036000 060156 177735 007506 000000 000040 006000 033760
00010: 146547 000456 000000 017000 033760 153736 000457 017000
00020: 000000 031460 034625 000040 016000 033760 000000 000022
00030: 000455 017000 113575 000002 000000 000455 017000 001575
00040: 154102 000440 000000 017030 033760 000000 000500 017000
00050: 000000 001176 000000 000455 017030 033760 000000 000000
00060: 000501 017000 031460 032770 000000 000040 006000 031460
```

```
00070: 015024 000040 000000 006000 000000 000000 000000 000000
00100: SAME: TO 000200-1


*T RECORD 1973 (%3665, #7B5)
00000: 036000 060156 162124 007564 000000 104727 034001 034635
00010: 031760 146451 000000 000440 017300 031460 032766 000040
00020: 000000 006000 001177 000000 000455 017300 000000 031460
00030: 032766 000040 006000 031760 000000 154243 000440 017340
00040: 033760 000020 000000 000440 017000 121560 000000 000500
00050: 000000 017000 031460 034656 000040 016000 000000 001177
00060: 000000 000455 017030 033760 000000 000000 000500 017000
00070: 031760 146647 000000 000440 000000 000000 000000 000000
00100: SAME: TO 000200-1


*T RECORD 1974 (%3666, #7B6)
00000: 036000 060156 113073 007642 000000 017030 033760 000000
00010: 000501 017000 000000 031460 032770 000040 006000 031460
00020: 000000 015140 000040 006000 173333 034001 000000 034653
00030: 031760 146451 000440 017300 000000 031460 032766 000040
00040: 006000 031460 000000 034666 000040 016000 001177 000000
00050: 000000 000455 017030 033760 000000 000500 000000 017000
00060: 031760 146651 000440 017030 000000 033760 000000 000501
00070: 017000 031460 000000 032770 000000 000000 000000 000000
00100: SAME: TO 000200-1


*T RECORD 1975 (%3667, #7B7)
00000: 036000 060156 041041 007720 000000 000040 006000 031460
00010: 015140 000040 000000 006000 031760 146451 000440 017300
00020: 000000 031460 032766 000040 006000 003577 000000 000120
00030: 000442 017000 001162 000000 000000 000455 017300 031460
00040: 032766 000040 000000 006000 066663 004001 034671 031475
00050: 000000 000000 000440 017000 034626 000000 000000 020040
00060: 003000 165714 030000 146573 000000 114631 115006 063146
00070: 063006 063146 000000 063006 000000 000000 000000 000000
00100: SAME: TO 000200-1


*T RECORD 1976 (%3670, #7B8)
00000: 034000 060153 023425 007776 000000 050753 102400 063146
00010: 063006 063146 000000 063006 063146 063373 050753 102400
00020: 000000 104000 000010 040000 000016 077600 000000 000020
00030: 040000 000022 077600 000016 000000 040000 000020 057640
00040: 000020 077600 000000 000014 077600 000034 000000 000000
00050: 000000 040000 000000 040000 000002 040000 000000 000004
00060: 060000 000004 050000 000010 000000 062000 000016 024117
00070: 000000 000000 000000 000000 000000 000000 000000 000000
00100: SAME: TO 000200-1


*T RECORD 1977 (%3671, #7B9)
00000: 002000 120000 120000 000000 000000 000000 000000 000000
00010: SAME: TO 000200-1


*T RECORD 1978 (%3672, #7BA)
00000: 025000 020000 027023 077107 051110 047040 006137 000000
00010: SAME: TO 000020-1
00020: 000000 020107 051101 042101 052111 047516 020110 040516
00030: 042114 042522 020040 036070 034061 030462 032456 031063
00040: 030465 037040 020040 020040 020040 020040 020040 020040
00050: 020040 020040 000000 000000 000000 000000 000000 000000
```

```
00060: SAME: TO 000200-1

*T RECORD 1979 (%3673, #7BB)
00000: 003400 040001 057220 077107 051110 047000 000000 000000
00010: SAME: TO 000200-1

*T RECORD 1980 (%3674, #7BC)
00000: 036000 060156 102264 000000 000000 006136 034001 034673
00010: 031460 026044 000000 000040 006000 031760 154243 000440
00020: 000000 017340 035760 000000 000500 017002 000000 001560
00030: 154170 000440 017340 031760 000000 135277 000440 017360
00040: 031760 154242 000000 000440 017340 033760 022124 000500
00050: 000000 006000 031760 135257 000440 017030 000000 031760
00060: 135277 000440 017360 101260 000000 000000 000440 017000
00070: 031260 000000 000000 020440 000000 000000 000000 000000
00100: SAME: TO 000200-1

*T RECORD 1981 (%3675, #7BD)
00000: 036000 060156 106760 000056 000000 007000 013260 000000
00010: 000040 017000 000000 034736 035115 120040 002000 031460
00020: 000000 026523 000040 006000 123645 034001 000000 034711
00030: 031460 000000 000040 007000 000000 031460 034724 000040
00040: 006000 031460 000000 026044 000040 006000 033760 130063
00050: 000000 000440 017000 031760 101415 000440 000000 017300
00060: 101260 000000 000440 017000 000000 041260 001427 020440
00070: 006070 031460 000000 000000 000000 000000 000000 000000
00100: SAME: TO 000200-1

*T RECORD 1982 (%3676, #7BE)
00000: 036000 060156 075671 000134 000000 000040 007000 031460
00010: 034724 000040 000000 006000 031460 034673 000040 006000
00020: 000000 031460 000000 000040 007000 031760 000000 134721
00030: 000440 017340 033760 000000 000000 000500 017140 033760
00040: 000000 000501 000000 017140 102161 030001 034727 033760
00050: 000000 000000 000502 017140 033760 152677 000000 000443
00060: 017000 001563 000003 000440 000000 017360 031462 000000
00070: 000440 017270 000000 031461 000000 000000 000000 000000
00100: SAME: TO 000200-1

*T RECORD 1983 (%3677, #7BF)
00000: 036000 060156 144756 000212 000000 000000 000440 017270
00010: 031460 000000 000000 000440 017270 031460 000000 000040
00020: 000000 007000 031460 035124 000040 006000 000000 031460
00030: 035126 000040 006000 031460 000000 035131 000040 006000
00040: 031460 035134 000000 000040 006000 031460 034710 000040
00050: 000000 016000 105743 034000 152653 000000 000000 000000
00060: 000000 000000 000000 000000 000000 152663 152665 000003
00070: 000005 000010 000000 000011 000000 000000 000000 000000
00100: SAME: TO 000200-1

*T RECORD 1984 (%3700, #7C0)
00000: 036000 060156 155012 000270 000000 034673 034712 034721
00010: 035142 000000 000000 000125 000252 000377 000000 000000
00020: 000000 000000 000000 000000 100010 000000 000000 001000
00030: 000000 000600 000000 000000 000000 100011 000000 001000
00040: 000000 000600 000000 000000 000000 100012 000000 001000
00050: 000000 000000 000600 000000 000000 000000 000000 000000
00060: 100013 000000 001000 000000 000000 000600 000000 000000
```

```
00070: 000000 074410 000000 004000 000000 000000 000000 000000
00100: SAME: TO 000200-1


*T RECORD 1985 (%3701, #7C1)
00000: 036000 060156 177523 000346 000000 152743 000000 100005
00010: 000000 001000 000000 000000 000600 000000 000000 054550
00020: 000000 034001 034743 033760 000007 000440 000000 017000
00030: 001560 074402 000440 017340 000000 031760 002501 000440
00040: 017070 001560 000000 074476 000440 017300 031760 000025
00050: 000000 000440 017070 031460 035002 000040 000000 016000
00060: 031460 000000 000440 017340 000000 033760 000000 000501
00070: 017000 031760 000000 152653 000000 000000 000000 000000
00100: SAME: TO 000200-1


*T RECORD 1986 (%3702, #7C2)
00000: 036000 060156 113133 000424 000000 000440 017340 031760
00010: 000000 001500 000000 017034 033760 000000 000502 017000
00020: 000000 033760 000007 000440 017000 001560 000000 074402
00030: 000440 017340 031461 000000 000000 000440 017000 142606
00040: 034001 034761 000000 031460 034770 120040 005000 031562
00050: 000000 002525 000440 017070 001560 074476 000000 000440
00060: 017300 031462 000000 001440 000000 017036 033760 000000
00070: 000502 017000 000000 031562 000000 000000 000000 000000
00100: SAME: TO 000200-1


*T RECORD 1987 (%3703, #7C3)
00000: 036000 060156 067733 000502 000000 000025 000440 017070
00010: 031460 035002 000000 000040 016000 033562 002500 000442
00020: 000000 017000 033760 000000 000501 017000 000000 043561
00030: 000077 000441 017000 031161 000000 000000 000442 017070
00040: 001560 074476 000000 000440 017340 033760 000000 000501
00050: 000000 017000 031462 000000 001440 017036 000000 100651
00060: 034001 034777 033760 000000 000000 000502 017000 043561
00070: 000017 000441 000000 017000 000000 000000 000000 000000
00100: SAME: TO 000200-1


*T RECORD 1988 (%3704, #7C4)
00000: 036000 060156 022170 000560 000000 031161 000000 000442
00010: 017070 031760 000000 177777 000440 017030 031760 101416
00020: 000000 000440 017360 031460 000000 000040 000000 017160
00030: 031760 101362 000440 017300 000000 001560 100001 000440
00040: 017070 031760 000000 145307 000440 017300 031760 000056
00050: 000000 000440 017070 033760 000055 000440 000000 017000
00060: 001560 074402 000440 017300 000000 031760 052400 000440
00070: 017070 031460 000000 035073 000000 000000 000000 000000
00100: SAME: TO 000200-1


*T RECORD 1989 (%3705, #7C5)
00000: 036000 060156 114572 000636 000000 000040 006000 143214
00010: 034001 035015 000000 031460 034611 000040 006000 031460
00020: 000000 020742 000040 006000 031460 035064 000000 000040
00030: 006000 041260 000000 000440 000000 017030 031760 154534
00040: 000440 017360 000000 031760 144276 000440 017360 031460
00050: 000000 000000 000040 017160 031760 144450 000000 000440
00060: 017360 031760 152653 000440 000000 017340 033760 000000
00070: 000500 017000 000000 001560 000000 000000 000000 000000
00100: SAME: TO 000200-1
```

420

```
*T RECORD 1990 (%3706, #7C6)
00000: 036000 060156 010023 000714 000000 152661 000440 017340
00010: 033760 000000 000000 000500 017000 031760 145656 000440
00020: 000000 017340 001560 000000 000500 017340 000000 136320
00030: 034001 035033 031760 143026 000000 000440 017360 031760
00040: 152660 000440 000000 017360 031760 152654 000440 017300
00050: 000000 041260 000000 000440 017070 031460 000000 000000
00060: 000040 017160 101760 000000 000000 000440 017170 031760
00070: 153444 000440 000000 017030 000000 000000 000000 000000
00100: SAME: TO 000200-1

*T RECORD 1991 (%3707, #7C7)
00000: 036000 060156 157604 000772 000000 031760 154242 000440
00010: 017360 041260 000000 000000 000440 017030 031760 154241
00020: 000000 000440 017360 031760 154243 000440 000000 017360
00030: 031460 035456 000040 006000 000000 031760 026014 000440
00040: 017030 031760 000000 135022 000440 017360 014213 034001
00050: 000000 035051 031760 152653 000440 017340 000000 031760
00060: 000000 000500 017000 031460 000000 035062 120040 005000
00070: 031460 035470 000000 000040 000000 000000 000000 000000
00100: SAME: TO 000200-1

*T RECORD 1992 (%3710, #7C8)
00000: 036000 060156 074555 001050 000000 006000 031760 100001
00010: 000440 017030 000000 031760 154463 000440 017360 031460
00020: 000000 034736 000040 006000 031760 100002 000000 000440
00030: 017030 031760 154463 000440 000000 017360 031460 036126
00040: 000040 006000 000000 031460 000000 000040 007000 031760
00050: 000000 152653 000440 017340 033760 000000 000000 000500
00060: 017000 001560 152667 000440 000000 017340 174715 034001
00070: 035067 031760 000000 135023 000000 000000 000000 000000
00100: SAME: TO 000200-1

*T RECORD 1993 (%3711, #7C9)
00000: 036000 060156 027356 001126 000000 000440 017360 031760
00010: 000003 000440 000000 017030 031460 002514 000040 006000
00020: 000000 031460 000000 000040 007000 033760 000000 000000
00030: 000440 017000 033760 000000 000000 000441 017000 033760
00040: 000077 000442 000000 017000 001560 152673 000440 017340
00050: 000000 001561 030400 000440 017360 103461 000000 000000
00060: 000441 017160 121161 000000 000000 000442 017000 031460
00070: 035100 120040 000000 005000 000000 000000 000000 000000
00100: SAME: TO 000200-1

*T RECORD 1994 (%3712, #7CA)
00000: 036000 060156 007132 001204 000000 111562 000377 000440
00010: 017000 031460 000000 035110 020040 005000 037615 034001
00020: 000000 035105 103460 000000 000440 017000 000000 003562
00030: 000100 000442 017000 031460 000000 035076 000040 016000
00040: 031460 000000 000000 000040 037150 101760 001000 000440
00050: 000000 017340 033760 000002 000440 017000 000000 031560
00060: 000000 000500 017070 031460 000000 000000 000040 027170
00070: 031460 000000 000000 000440 000000 000000 000000 000000
00100: SAME: TO 000200-1

*T RECORD 1995 (%3713, #7CB)
00000: 036000 060156 031475 001262 000000 017030 031760 154244
00010: 000440 017360 000000 031460 033001 000040 006000 031760
```

421

```
00020: 000000 154244 000440 017340 033760 035505 000000 000500
00030: 006000 031760 154244 000440 000000 017340 101133 034001
00040: 035123 033760 000000 035642 000500 016000 103760 000000
00050: 000000 000441 017000 043260 035137 000440 000000 016000
00060: 033760 000002 000441 017000 000000 103760 000000 000440
00070: 017000 031460 000000 035137 000000 000000 000000 000000
00100: SAME: TO 000200-1


*T RECORD 1996 (%3714, #7CC)
00000: 036000 060156 012143 001340 000000 000040 016000 033760
00010: 000004 000441 000000 017000 033760 000002 000440 017000
00020: 000000 031460 035137 000040 016000 033760 000000 000010
00030: 000441 017000 033760 000003 000000 000440 017000 031460
00040: 035137 000040 000000 016000 031760 154241 000440 017340
00050: 000000 041561 000000 000500 017000 113452 000000 034001
00060: 035141 035115 000000 120040 000000 003000 031460 034611
00070: 000040 006000 000000 031460 000000 000000 000000 000000
00100: SAME: TO 000200-1


*T RECORD 1997 (%3715, #7CD)
00000: 036000 060156 101432 001416 000000 020742 000040 006000
00010: 031760 177777 000000 000440 017030 031760 101416 000440
00020: 000000 017360 031460 000000 000040 017160 000000 033760
00030: 074402 000440 017000 001560 000000 000007 001440 017340
00040: 033760 000000 000000 000500 017000 043560 000374 000440
00050: 000000 017000 031560 012401 000440 017070 000000 031460
00060: 035160 150040 005000 031760 000000 101362 000440 017300
00070: 033760 000007 000000 001440 000000 000000 000000 000000
00100: SAME: TO 000200-1


*T RECORD 1998 (%3716, #7CE)
00000: 036000 060156 171542 001474 000000 017000 002165 034001
00010: 035157 001560 000000 100001 000440 017070 031460 000000
00020: 000000 000040 017000 033760 000055 000440 000000 017000
00030: 001560 074402 000440 017300 000000 031760 052400 000440
00040: 017070 041260 000000 000000 000440 017030 031760 154241
00050: 000000 000440 017360 031760 154534 000440 000000 017340
00060: 031760 000000 000500 017000 000000 031460 034736 120040
00070: 006000 041260 000000 000000 000000 000000 000000 000000
00100: SAME: TO 000200-1


*T RECORD 1999 (%3717, #7CF)
00000: 036000 060156 171430 001552 000000 000440 017030 031760
00010: 154243 000440 000000 017360 031760 154534 000440 017360
00020: 000000 031460 035456 000040 006000 024367 000000 034001
00030: 035175 033760 153444 000440 000000 017000 031460 000000
00040: 000440 017030 000000 031760 154242 000440 017360 031460
00050: 000000 021362 000040 006000 033760 153444 000000 000440
00060: 017000 031460 021331 000040 000000 006000 033760 152771
00070: 000440 017000 000000 031460 000000 000000 000000 000000
00100: SAME: TO 000200-1


*T RECORD 2000 (%3720, #7D0)
00000: 036000 060156 174463 001630 000000 002745 000040 006000
00010: 031460 000000 000000 000040 007000 041260 000000 000440
00020: 000000 017030 031760 154241 000440 017360 000000 031460
00030: 035456 000040 006000 031760 000000 152653 000440 017340
00040: 031760 000000 000000 000500 017000 011672 034001 035213
```

```
00050: 000000 031460 035220 020040 005000 031760 000000 000000
00060: 000440 017070 031760 144644 000000 000440 017360 033760
00070: 152744 000440 000000 017000 000000 000000 000000 000000
00100: SAME: TO 000200-1

*T RECORD 2001 (%3721, #7D1)
00000: 036000 060156 163703 001706 000000 031460 002745 000040
00010: 006000 033760 000000 000055 000440 017000 001560 074402
00020: 000000 000440 017300 031760 052400 000440 000000 017070
00030: 041260 000000 000440 017030 000000 031760 135023 000440
00040: 017360 031760 000000 135022 000440 017360 031460 021331
00050: 000000 000040 006000 033760 153444 000440 000000 017000
00060: 031460 021362 000040 006000 000000 141003 032001 035231
00070: 033760 144052 000000 000440 000000 000000 000000 000000
00100: SAME: TO 000200-1

*T RECORD 2002 (%3722, #7D2)
00000: 036000 060156 045214 001764 000000 017000 031460 002745
00010: 000040 006000 000000 031760 144276 000440 017340 031760
00020: 000000 000000 000500 017000 031460 027204 000000 120040
00030: 006000 033760 152762 000440 000000 017000 031460 002745
00040: 000040 006000 000000 033760 152771 000440 017000 031460
00050: 000000 002745 000040 006000 033760 152753 000000 000440
00060: 017000 031460 002745 000040 000000 006000 031460 036036
00070: 000040 006000 000000 031460 000000 000000 000000 000000
00100: SAME: TO 000200-1

*T RECORD 2003 (%3723, #7D3)
00000: 036000 060156 065762 002042 000000 000000 000040 007000
00010: 030035 012400 000000 152753 100001 000250 000144 000564
00020: 000000 000016 000000 000000 100001 000036 000000 000742
00030: 000036 000310 000000 000000 000000 100002 000000 001000
00040: 000000 000600 000000 000000 000000 057343 034001 035246
00050: 000000 031460 035462 000040 006000 031460 000000 034611
00060: 000040 006000 031460 021331 000000 000040 006000 033760
00070: 153444 000440 000000 017000 000000 000000 000000 000000
00100: SAME: TO 000200-1

*T RECORD 2004 (%3724, #7D4)
00000: 036000 060156 127324 002120 000000 031460 021210 000040
00010: 006000 033760 000000 153050 000440 017000 031460 021057
00020: 000000 000040 006000 033760 153532 000440 000000 017000
00030: 031460 002620 000040 006000 000000 031760 154243 000440
00040: 017300 031760 000000 000000 000440 017070 031460 035456
00050: 000000 000040 016000 031460 035462 000040 000000 006000
00060: 031460 034611 000040 006000 000000 017713 034001 035264
00070: 031460 021331 000000 000040 000000 000000 000000 000000
00100: SAME: TO 000200-1

*T RECORD 2005 (%3725, #7D5)
00000: 036000 060156 031747 002176 000000 006000 033760 153452
00010: 000440 017000 000000 031460 021210 000040 006000 033760
00020: 000000 153104 000440 017000 031460 021057 000000 000040
00030: 006000 033760 153540 000440 000000 017000 031460 002620
00040: 000040 006000 000000 031760 154243 000440 017300 031760
00050: 000000 000002 000440 017070 031460 035456 000000 000040
00060: 016000 031460 035462 000040 000000 006000 031460 034611
00070: 000040 006000 000000 031460 000000 000000 000000 000000
```

```
00100: SAME: TO 000200-1

*T RECORD 2006 (%3726, #7D6)
00000: 036000 060156 155403 002254 000000 021331 000040 006000
00010: 033760 153460 000000 000440 017000 136421 034001 035302
00020: 000000 031460 021210 000040 006000 033760 000000 153140
00030: 000440 017000 031460 021057 000000 000040 006000 033760
00040: 153546 000440 000000 017000 031460 002620 000040 006000
00050: 000000 031760 154243 000440 017300 031760 000000 000004
00060: 000440 017070 031460 035456 000000 000040 016000 031460
00070: 035462 000040 000000 006000 000000 000000 000000 000000
00100: SAME: TO 000200-1

*T RECORD 2007 (%3727, #7D7)
00000: 036000 060156 170051 002332 000000 031460 034611 000040
00010: 006000 031460 000000 021331 000040 006000 033760 153466
00020: 000000 000440 017000 031460 021210 000040 000000 006000
00030: 033760 153174 000440 017000 000000 136112 034001 035320
00040: 031460 021057 000000 000040 006000 033760 153554 000440
00050: 000000 017000 031460 002620 000040 006000 000000 031760
00060: 154243 000440 017300 031760 000000 000006 000440 017070
00070: 031460 035456 000000 000040 000000 000000 000000 000000
00100: SAME: TO 000200-1

*T RECORD 2008 (%3730, #7D8)
00000: 036000 060156 175054 002410 000000 016000 031460 035462
00010: 000040 006000 000000 031460 034611 000040 006000 031460
00020: 000000 021331 000040 006000 033760 153474 000000 000440
00030: 017000 031460 021210 000040 000000 006000 033760 153230
00040: 000440 017000 000000 031460 021057 000040 006000 033760
00050: 000000 153562 000440 017000 136473 034001 000000 035336
00060: 031460 002620 000040 006000 000000 031760 154243 000440
00070: 017300 031760 000000 000010 000000 000000 000000 000000
00100: SAME: TO 000200-1

*T RECORD 2009 (%3731, #7D9)
00000: 036000 060156 022106 002466 000000 000440 017070 031460
00010: 035456 000040 000000 016000 031460 035462 000040 006000
00020: 000000 031460 034611 000040 006000 031460 000000 021331
00030: 000040 006000 033760 153502 000000 000440 017000 031460
00040: 021210 000040 000000 006000 033760 153264 000440 017000
00050: 000000 031460 021057 000040 006000 033760 000000 153570
00060: 000440 017000 031460 002620 000000 000040 006000 031760
00070: 154243 000440 000000 017300 000000 000000 000000 000000
00100: SAME: TO 000200-1

*T RECORD 2010 (%3732, #7DA)
00000: 036000 060156 030733 002544 000000 117313 034001 035354
00010: 031760 000012 000000 000440 017070 031460 035456 000040
00020: 000000 016000 031460 035462 000040 006000 000000 031460
00030: 034611 000040 006000 031460 000000 021331 000040 006000
00040: 033760 153510 000000 000440 017000 031460 021210 000040
00050: 000000 006000 033760 153320 000440 017000 000000 031460
00060: 021057 000040 006000 033760 000000 153576 000440 017000
00070: 031460 002620 000000 000040 000000 000000 000000 000000
00100: SAME: TO 000200-1

*T RECORD 2011 (%3733, #7DB)
```

424

```
00000: 036000 060156 077553 002622 000000 006000 031760 154243
00010: 000440 017300 000000 031760 000014 000440 017070 031460
00020: 000000 035456 000040 016000 005602 034001 000000 035372
00030: 031460 035462 000040 006000 000000 031460 034611 000040
00040: 006000 031460 000000 021331 000040 006000 033760 153516
00050: 000000 000440 017000 031460 021210 000040 000000 006000
00060: 033760 153354 000440 017000 000000 031460 021057 000040
00070: 006000 033760 000000 153604 000000 000000 000000 000000
00100: SAME: TO 000200-1
```

*T RECORD 2012 (%3734, #7DC)
```
00000: 036000 060156 127713 002700 000000 000440 017000 031460
00010: 002620 000040 000000 006000 031760 154243 000440 017300
00020: 000000 031760 000016 000440 017070 031460 000000 035456
00030: 000040 016000 031460 035462 000000 000040 006000 031460
00040: 034611 000040 000000 006000 020505 034001 035410 031460
00050: 000000 021331 000040 006000 033760 153524 000000 000440
00060: 017000 031460 021210 000040 000000 006000 033760 153410
00070: 000440 017000 000000 031460 000000 000000 000000 000000
00100: SAME: TO 000200-1
```

*T RECORD 2013 (%3735, #7DD)      '
```
00000: 036000 060156 051606 002756 000000 021057 000040 006000
00010: 033760 153612 000000 000440 017000 031460 002620 000040
00020: 000000 006000 031760 154243 000440 017300 000000 031760
00030: 000020 000440 017070 031460 000000 035456 000040 016000
00040: 031760 154241 000000 000440 017340 033760 000000 000501
00050: 000000 017000 033760 153005 000440 017000 000000 041561
00060: 000001 000440 017000 047060 000000 006001 035426 031460
00070: 035430 020040 000000 005000 000000 000000 000000 000000
00100: SAME: TO 000200-1
```

*T RECORD 2014 (%3736, #7DE)
```
00000: 036000 060156 036663 003034 000000 033760 153000 000440
00010: 017000 031460 000000 020765 000040 016000 070723 005000
00020: 000000 153000 000001 000001 000001 000001 000000 177777
00030: 000000 000001 000001 000001 000000 177777 153005 016001
00040: 035431 031760 000000 154241 000440 017340 033760 000000
00050: 000000 000501 017000 033760 153017 000440 000000 017000
00060: 041561 000002 000440 017000 000000 031460 035437 020040
00070: 005000 033760 000000 153012 000000 000000 000000 000000
00100: SAME: TO 000200-1
```

*T RECORD 2015 (%3737, #7DF)
```
00000: 036000 060156 061325 003112 000000 000440 017000 031460
00010: 020765 000040 000000 016000 102533 005000 153012 000001
00020: 000000 000001 000001 000002 177777 000000 000000 000001
00030: 000001 000002 177777 153021 000000 016001 035440 031760
00040: 154241 000440 000000 017340 033760 000000 000501 017000
00050: 000000 033760 153031 000440 017000 041561 000000 000004
00060: 000440 017000 031460 035446 000000 020040 005000 033760
00070: 153024 000440 000000 017000 000000 000000 000000 000000
00100: SAME: TO 000200-1
```

*T RECORD 2016 (%3740, #7E0)
```
00000: 036000 060156 114552 003170 000000 031460 020765 000040
00010: 016000 102577 000000 005000 153024 000001 000001 000001
00020: 000000 000003 177777 000000 000001 000001 000000 000003
```

```
00030: 177777 153035 016001 035447 000000 031760 154241 000440
00040: 017340 033760 000000 000000 000501 017000 033760 153043
00050: 000000 000440 017000 041561 000010 000440 000000 017000
00060: 031460 035455 020040 005000 000000 033760 153036 000440
00070: 017000 031460 000000 020765 000000 000000 000000 000000
00100: SAME: TO 000200-1


*T RECORD 2017 (%3741, #7E1)
00000: 036000 060156 020503 003246 000000 000040 016000 102645
00010: 005000 153036 000000 000001 000001 000001 000004 177777
00020: 000000 000000 000001 000001 000004 177777 000000 153051
00030: 024001 035456 031460 035422 000000 000040 006000 031460
00040: 035431 000040 000000 006000 031460 035440 000040 006000
00050: 000000 031460 035447 000040 016000 031760 000000 154241
00060: 000440 017340 031460 000000 000000 000100 015000 041260
00070: 035456 000440 000000 006070 000000 000000 000000 000000
00100: SAME: TO 000200-1


*T RECORD 2018 (%3742, #7E2)
00000: 036000 060156 121570 003324 000000 031460 000000 000040
00010: 011000 031760 000000 154241 000440 017300 031760 000000
00020: 000000 000400 007070 167400 034000 153050 000000 100004
00030: 000310 000447 154257 060104 000000 020040 153642 154124
00040: 154146 154261 000000 060104 020040 153666 154124 154146
00050: 000000 154263 060104 020040 153712 154124 000000 154146
00060: 154265 060104 020040 153736 000000 154124 154146 177777
00070: 100004 000310 000000 000447 000000 000000 000000 000000
00100: SAME: TO 000200-1


*T RECORD 2019 (%3743, #7E3)
00000: 036000 060156 100341 003402 000000 154257 060104 020040
00010: 153644 154126 000000 154150 154261 060104 020040 153670
00020: 000000 154126 154150 154263 060104 020040 000000 153714
00030: 154126 154150 154265 060104 000000 020040 153740 154126
00040: 154150 177777 000000 163244 034000 153140 100004 000310
00050: 000000 000447 154257 060104 020040 153646 000000 154130
00060: 154152 154261 060104 020040 000000 153672 154130 154152
00070: 154263 060104 000000 020040 000000 000000 000000 000000
00100: SAME: TO 000200-1


*T RECORD 2020 (%3744, #7E4)
00000: 036000 060156 105436 003460 000000 153716 154130 154152
00010: 154265 060104 000000 020040 153742 154130 154152 177777
00020: 000000 100004 000310 000447 154257 060104 000000 020040
00030: 153650 154132 154154 154261 000000 060104 020040 153674
00040: 154132 154154 000000 154263 060104 020040 153720 154132
00050: 000000 154154 154265 060104 020040 153744 000000 154132
00060: 154154 177777 163474 034000 000000 153230 100004 000310
00070: 000447 154257 000000 060104 000000 000000 000000 000000
00100: SAME: TO 000200-1


*T RECORD 2021 (%3745, #7E5)
00000: 036000 060156 013115 003536 000000 020040 153652 154134
00010: 154156 154261 000000 060104 020040 153676 154134 154156
00020: 000000 154263 060104 020040 153722 154134 000000 154156
00030: 154265 060104 020040 153746 000000 154134 154156 177777
00040: 100004 000310 000000 000447 154257 060204 020040 153654
00050: 000000 154136 154160 154261 060204 020040 000000 153700
```

426

```
00060: 154136 154160 154263 060204 000000 020040 153724 154136
00070: 154160 154265 000000 060204 000000 000000 000000 000000
00100: SAME: TO 000200-1


*T RECORD 2022 (%3746, #7E6)
00000: 036000 060156 046562 003614 000000 020040 153750 154136
00010: 154160 177777 000000 164324 034000 153320 100004 000310
00020: 000000 000447 154257 060104 020040 153656 000000 154140
00030: 154162 154261 060104 020040 000000 153702 154140 154162
00040: 154263 060104 000000 020040 153726 154140 154162 154265
00050: 000000 060104 020040 153752 154140 154162 000000 177777
00060: 100004 000310 000447 154257 000000 060104 020040 153660
00070: 154142 154164 000000 154261 000000 000000 000000 000000
00100: SAME: TO 000200-1


*T RECORD 2023 (%3747, #7E7)
00000: 036000 060156 102122 003672 000000 060104 020040 153704
00010: 154142 154164 000000 154263 060104 020040 153730 154142
00020: 000000 154164 154265 060104 020040 153754 000000 154142
00030: 154164 177777 164154 034000 000000 153410 100004 000310
00040: 000447 154257 000000 060104 020040 153662 154144 154166
00050: 000000 154261 060104 020040 153706 154144 000000 154166
00060: 154263 060104 020040 153732 000000 154144 154166 154265
00070: 060104 020040 000000 153756 000000 000000 000000 000000
00100: SAME: TO 000200-1


*T RECORD 2024 (%3750, #7E8)
00000: 036000 060156 002763 003750 000000 154144 154166 177777
00010: 000001 000144 000000 000447 154255 060104 177777 000001
00020: 000000 000144 000447 154255 060104 177777 000000 000001
00030: 000144 000447 154255 060104 000000 177777 000001 000144
00040: 000447 154255 000000 060104 177777 000001 000144 000447
00050: 000000 154255 122043 034000 153500 060104 000000 177777
00060: 000001 000144 000447 154255 000000 060204 177777 000001
00070: 000144 000447 000000 154255 000000 000000 000000 000000
00100: SAME: TO 000200-1


*T RECORD 2025 (%3751, #7E9)
00000: 036000 060156 005216 004026 000000 060104 177777 000001
00010: 000144 000447 000000 154255 060104 177777 000001 000144
00020: 000000 000447 154255 060104 177777 100001 000000 000250
00030: 000564 000004 000001 153620 000000 100001 000250 000564
00040: 000004 000001 000000 153622 100001 000250 000564 000004
00050: 000000 000001 153624 100001 000250 000564 000000 000004
00060: 000001 153626 100001 000250 000000 000564 000004 000001
00070: 153630 161101 000000 025000 000000 000000 000000 000000
00100: SAME: TO 000200-1


*T RECORD 2026 (%3752, #7EA)
00000: 036000 060156 026016 004104 000000 153570 100001 000250
00010: 000564 000004 000000 000001 153632 100001 000250 000564
00020: 000000 000004 000001 153634 100001 000250 000000 000564
00030: 000004 000001 153636 100001 000000 000250 000564 000004
00040: 000001 153640 000000 044137 046124 051510 040504 046511
00050: 000000 042124 030537 050124 042122 047520 000000 043501
00060: 046501 046511 047040 046501 000000 054040 042524 041510
00070: 066215 011000 000000 154102 000000 000000 000000 000000
00100: SAME: TO 000200-1
```

```
*T RECORD 2027 (%3753, #7EB)
00000: 036000 060156 003024 004162 000000 076400 000022 076400
00010: 000022 076400 000000 000022 000000 000000 062000 000016
00020: 000000 062000 000016 000000 000000 000000 000000 000000
00030: 000000 000000 013624 011000 000000 154124 000000 000000
00040: 000000 000000 000000 000000 000000 000000 000000 062000
00050: 000000 000016 062000 000014 000000 000000 000000 000000
00060: 000000 101400 000022 021600 000000 015400 154146 076340
00070: 000024 076340 000000 000024 000000 000000 000000 000000
00100: SAME: TO 000200-1

*T RECORD 2028 (%3754, #7EC)
00000: 036000 060156 023225 004240 000000 076340 000024 076340
00010: 000024 076340 000000 000024 062000 000020 076340 000024
00020: 000000 076340 000024 076400 000022 154201 000000 154201
00030: 154201 154201 154201 154221 000000 154201 154201 154201
00040: 140315 010000 000000 154201 076400 000024 062000 000016
00050: 000000 000000 000000 050000 000010 101400 000000 000024
00060: 116000 000016 000000 000000 000000 130000 000010 154325
00070: 010000 154221 000000 062000 000000 000000 000000 000000
00100: SAME: TO 000200-1

*T RECORD 2029 (%3755, #7ED)
00000: 036000 060156 164331 004316 000000 000016 000000 000000
00010: 050000 000010 000000 040000 000002 116000 000016 000000
00020: 000000 000000 130000 000010 100000 000000 000000 114277
00030: 011000 154245 041531 040516 000000 046501 043516 054505
00040: 046114 041114 000000 041513 020101 046114 020040 041440
00050: 000000 020040 046440 020040 054440 020040 000000 041040
00060: 032620 032001 035470 033760 000000 154267 000440 017000
00070: 031460 035500 000000 000040 000000 000000 000000 000000
00100: SAME: TO 000200-1

*T RECORD 2030 (%3756, #7EE)
00000: 036000 060156 151343 004374 000000 006000 033760 154313
00010: 000440 017000 000000 031460 035500 000040 006000 033760
00020: 000000 154337 000440 017000 031460 035500 000000 000040
00030: 006000 033760 154363 000440 000000 017000 031460 035500
00040: 000040 016000 000000 031460 002745 000040 006000 003560
00050: 000000 000007 000440 017000 031460 002745 000000 000040
00060: 006000 003560 000007 000440 000000 017000 031460 002620
00070: 000040 016000 000000 020604 000000 000000 000000 000000
00100: SAME: TO 000200-1

*T RECORD 2031 (%3757, #7EF)
00000: 036000 060156 131625 004452 000000 034000 154267 100001
00010: 000062 000001 000000 000062 000144 177777 177777 100001
00020: 000000 000062 000144 000226 000001 177777 000000 177777
00030: 100001 000053 000226 000001 000000 000000 154245 100001
00040: 000240 000001 000000 000062 000144 177777 177777 100001
00050: 000000 000240 000144 000226 000001 177777 000000 177777
00060: 100001 000231 000226 000001 000000 000000 154247 100001
00070: 000416 000001 000000 000062 000000 000000 000000 000000
00100: SAME: TO 000200-1

*T RECORD 2032 (%3760, #7F0)
00000: 036000 060156 057135 004530 000000 000144 177777 177777
```

```
00010: 100001 000416 000000 000144 000226 000001 177777 177777
00020: 000000 100001 000407 012557 014000 154357 000000 000226
00030: 000001 000000 154251 100001 000000 000574 000001 000062
00040: 000144 177777 000000 177777 100001 000574 000144 000226
00050: 000000 000001 177777 177777 100001 000565 000000 000226
00060: 000001 000000 154253 010557 000000 034001 035505 007160
00070: 000000 000440 000000 017002 000000 000000 000000 000000
00100: SAME: TO 000200-1


*T RECORD 2033 (%3761, #7F1)
00000: 036000 060156 016446 004606 000000 001560 154407 000440
00010: 017340 033760 000000 000000 000514 017140 103760 000000
00020: 000000 000510 017140 033760 000000 000507 000000 017140
00030: 033760 002745 000500 006000 000000 031474 000000 000440
00040: 017030 031470 000000 000000 000500 015030 031467 000000
00050: 000000 000500 015030 031460 000000 000100 000000 015000
00060: 023760 000144 000440 017000 000000 031460 014744 000040
00070: 006000 033460 000000 000000 000000 000000 000000 000000
00100: SAME: TO 000200-1


*T RECORD 2034 (%3762, #7F2)
00000: 036000 060156 162641 004664 000000 000442 017000 033461
00010: 000000 000443 000000 017000 110577 034001 035523 033760
00020: 000000 077600 000440 017000 033760 000020 000000 000441
00030: 017000 031460 015140 000040 000000 006000 033760 040000
00040: 000442 017000 000000 033760 000042 000443 017000 031460
00050: 000000 015112 000040 006000 031460 014776 000000 000040
00060: 006000 033460 000000 000452 000000 017000 033461 000000
00070: 000453 011000 000000 033760 000000 000000 000000 000000
00100: SAME: TO 000200-1


*T RECORD 2035 (%3763, #7F3)
00000: 036000 060156 031304 004742 000000 000000 000407 011000
00010: 033760 000000 000000 000410 011000 033760 000000 000414
00020: 000000 017000 033760 154463 000440 017000 000000 031460
00030: 035611 000040 006000 116240 000000 034001 035541 103760
00040: 000144 000443 000000 017000 043260 000000 000444 017000
00050: 000000 033760 000144 000446 017000 013463 000000 000000
00060: 000443 017000 031460 035607 000000 020040 005000 001575
00070: 000014 000440 000000 017700 000000 000000 000000 000000
00100: SAME: TO 000200-1


*T RECORD 2036 (%3764, #7F4)
00000: 036000 060156 030521 005020 000000 013470 000000 000450
00010: 017000 001170 000000 000000 014456 017470 111563 000144
00020: 000000 000440 017000 031460 035555 120040 000000 005000
00030: 001574 000002 000440 017340 000000 031460 035562 000040
00040: 016000 111574 000000 000003 000440 017300 043260 000000
00050: 000000 000440 017030 114065 034001 035557 000000 003560
00060: 000003 000700 017140 035460 000000 000000 000640 017002
00070: 031460 000000 000000 000440 000000 000000 000000 000000
00100: SAME: TO 000200-1


*T RECORD 2037 (%3765, #7F5)
00000: 036000 060156 036624 005076 000000 017030 033472 000000
00010: 000441 017000 000000 030473 000000 000440 017000 036461
00020: 000000 000005 000641 017003 037760 000000 000000 000500
00030: 017002 030460 000000 000440 000000 017000 043260 003325
```

```
00040: 000440 006000 000000 120561 000144 000440 017000 113066
00050: 000000 000000 000441 017000 033260 000000 000000 115046
00060: 017000 035575 035601 020041 000000 001000 123461 000000
00070: 000441 017000 000000 161206 000000 000000 000000 000000
00100: SAME: TO 000200-1

*T RECORD 2038 (%3766, #7F6)
00000: 036000 060156 015447 005154 000000 034001 035575 031460
00010: 035600 050040 000000 005000 103467 000000 000447 017000
00020: 000000 031460 035601 000040 016000 013467 000000 000000
00030: 000447 017000 001167 000000 000000 000457 017030 031460
00040: 035636 000040 000000 006000 013461 000000 000441 017000
00050: 000000 031460 035575 140040 005000 003173 000000 000000
00060: 000444 017000 003152 035544 000000 024454 016000 031760
00070: 000076 000440 000000 017300 000000 000000 000000 000000
00100: SAME: TO 000200-1

*T RECORD 2039 (%3767, #7F7)
00000: 036000 060156 067327 005232 000000 041260 000000 000440
00010: 007070 030760 000000 002041 001440 017000 033760 000062
00020: 000000 000445 017000 074314 034001 035613 000000 031460
00030: 035616 000040 016000 030760 000000 000041 005440 017000
00040: 033760 000042 000000 000445 017000 031460 003113 000040
00050: 000000 006000 033461 000000 000456 017000 000000 033462
00060: 000000 000457 017000 031760 000000 043001 014440 017760
00070: 031465 000000 000000 000440 000000 000000 000000 000000
00100: SAME: TO 000200-1

*T RECORD 2040 (%3770, #7F8)
00000: 036000 060156 127720 005310 000000 017030 031760 043400
00010: 014440 017760 000000 001563 000033 000440 017760 031260
00020: 000000 000000 000440 017030 001563 000022 000000 014440
00030: 017760 033463 000000 014455 000000 017560 041260 000000
00040: 000440 017030 000000 124555 022001 035631 031760 041400
00050: 000000 014440 017760 021760 000000 000440 000000 017030
00060: 031460 000000 150040 007000 000000 031760 040000 014440
00070: 017760 031460 000000 000000 000000 000000 000000 000000
00100: SAME: TO 000200-1

*T RECORD 2041 (%3771, #7F9)
00000: 036000 060156 120733 005366 000000 000040 007000 001575
00010: 000056 014440 000000 017760 031760 047400 014440 017740
00020: 000000 031760 000000 000500 017000 035637 000000 000000
00030: 014040 003000 151773 026400 000000 154407 146653 000226
00040: 000062 154427 000000 147253 000404 000062 154436 147653
00050: 000000 000562 000062 154445 150253 000740 000000 000062
00060: 154454 100002 000055 000156 000000 000055 000156 000000
00070: 000000 100002 000000 000233 000000 000000 000000 000000
00100: SAME: TO 000200-1

*T RECORD 2042 (%3772, #7FA)
00000: 036000 060156 176372 005444 000000 000156 000055 000156
00010: 000000 000000 000000 100002 000411 000156 000055 000156
00020: 000000 000000 000000 100002 000567 000156 000000 000055
00030: 000156 000000 000000 100002 000000 003543 020001 035642
00040: 031460 000000 000000 000440 017030 031460 000000 000100
00050: 000000 015000 001560 154464 000440 017340 000000 033760
00060: 000000 000500 017340 033760 000000 035652 000513 006000
```

```
00070: 031460 000000 000000 000040 000000 000000 000000 000000
00100: SAME: TO 000200-1


*T RECORD 2043 (%3773, #7FB)
00000: 036000 060156 110343 005522 000000 011000 033760 036162
00010: 000401 006000 000000 031460 000000 000040 007000 134426
00020: 000000 012000 154464 154470 154474 154500 000000 154504
00030: 000001 150653 146653 025000 000000 000004 151253 147253
00040: 025400 000020 000000 151653 147653 026000 000100 152253
00050: 000000 150253 026400 072731 034001 035652 000000 101460
00060: 000000 000440 017340 023760 000000 000000 000506 017140
00070: 033760 000000 000000 000507 000000 000000 000000 000000
00100: SAME: TO 000200-1


*T RECORD 2044 (%3774, #7FC)
00000: 036000 060156 177547 005600 000000 017140 023760 000000
00010: 000510 017000 000000 033760 177400 000451 017000 103466
00020: 000000 000000 000446 017340 031760 000000 000000 001500
00030: 017036 033760 000377 000443 000000 017000 043563 000000
00040: 000503 017000 000000 001167 000000 000443 017340 033760
00050: 000000 000000 000504 017140 111563 000377 000000 000440
00060: 017000 033760 035670 120505 000000 005000 033464 000000
00070: 000445 017000 000000 074620 000000 000000 000000 000000
00100: SAME: TO 000200-1


*T RECORD 2045 (%3775, #7FD)
00000: 036000 060156 165722 005656 000000 034001 035670 031466
00010: 000000 000440 000000 017340 033760 000077 000443 017000
00020: 000000 121563 000000 000500 017000 031460 000000 035675
00030: 140040 005000 041260 000000 000000 000440 017030 043563
00040: 000000 000503 000000 017000 063563 000077 000455 017000
00050: 000000 033464 000000 000440 017000 000575 000000 000001
00060: 000440 017000 031460 003435 000000 000040 006000 034461
00070: 000004 000641 000000 017003 000000 000000 000000 000000
00100: SAME: TO 000200-1


*T RECORD 2046 (%3776, #7FE)
00000: 036000 060156 040104 005734 000000 033260 000000 000452
00010: 017000 033465 000000 000000 000440 017000 030463 003435
00020: 000000 000440 006000 034524 034001 035706 000000 034461
00030: 000004 000641 017003 001072 000000 000000 000440 017030
00040: 031760 000000 000000 001500 017036 103470 000000 000450
00050: 000000 017360 103471 000000 000451 017000 000000 035657
00060: 000000 020040 003000 103760 000000 000000 000440 017000
00070: 033760 153005 000000 000441 000000 000000 000000 000000
00100: SAME: TO 000200-1


*T RECORD 2047 (%3777, #7FF)
00000: 036000 060156 165506 006012 000000 017000 033760 153000
00010: 000442 017000 000000 031460 035733 000040 016000 033760
00020: 000000 000002 000440 017000 033760 153017 000000 000441
00030: 017000 033760 153012 000442 000000 017000 031460 035733
00040: 000040 016000 000000 101674 034001 035724 033760 000004
00050: 000000 000440 017000 033760 153031 000441 000000 017000
00060: 033760 153024 000442 017000 000000 031460 035733 000040
00070: 016000 033760 000000 000010 000000 000000 000000 000000
00100: SAME: TO 000200-1
```

431

```
*T RECORD 2048 (%4000, #800)
00000: 031400 060147 043206 006070 000000 000440 017000 033760
00010: 153043 000441 000000 017000 033760 153036 000442 017000
00020: 000000 031760 154241 000440 017340 041560 000000 000000
00030: 000500 017000 061560 000000 000000 021500 017070 033461
00040: 000000 000440 000000 017000 031460 035741 150040 005000
00050: 000000 033462 000000 000440 017000 031460 000000 020765
00060: 000040 016000 142441 000000 000000 000000 000000 000000
00070: SAME: TO 000200-1

*T RECORD 2049 (%4001, #801)
00000: 002000 120000 120000 000000 000000 000000 000000 000000
00010: SAME: TO 000200-1

*T RECORD 2050 (%4002, #802)
00000: 025000 020000 111465 077107 051113 050040 003251 000000
00010: SAME: TO 000020-1
00020: 000000 020107 051101 042101 052111 047516 020114 047503
00030: 040514 020106 052516 041524 044517 047123 020074 034460
00040: 030067 030064 027060 033060 030476 020040 020040 020040
00050: 020040 020040 000000 000000 000000 000000 000000 000000
00060: SAME: TO 000200-1

*T RECORD 2051 (%4003, #803)
00000: 003400 040001 060223 077107 051113 050000 000000 000000
00010: SAME: TO 000200-1

*T RECORD 2052 (%4004, #804)
00000: 036000 060156 115511 000000 000000 003250 034001 035742
00010: 031760 135023 000000 000440 017340 031760 000000 000500
00020: 000000 017000 031460 000000 020040 007000 000000 103260
00030: 000000 000440 017000 035460 000000 000004 000640 017002
00040: 001560 035754 000000 000440 017030 031460 000000 000440
00050: 000000 017300 031460 000000 000120 015000 000000 031460
00060: 000000 000100 015000 031460 000000 000000 000040 007000
00070: 031460 035763 000000 000040 000000 000000 000000 000000
00100: SAME: TO 000200-1

*T RECORD 2053 (%4005, #805)
00000: 036000 060156 113063 000056 000000 016000 031460 035770
00010: 000040 016000 000000 031460 035772 000040 016000 031460
00020: 000000 035774 000040 016000 135020 034001 000000 035760
00030: 031460 035776 000040 016000 000000 031460 036210 000040
00040: 016000 031460 000000 036214 000040 016000 031460 035714
00050: 000000 000040 006000 031460 000000 000040 000000 011000
00060: 033760 000000 000400 017000 000000 000560 000050 005440
00070: 017000 031460 000000 030562 000000 000000 000000 000000
00100: SAME: TO 000200-1

*T RECORD 2054 (%4006, #806)
00000: 036000 060156 024407 000134 000000 000040 016000 031460
00010: 035720 000040 000000 006000 031460 035764 000040 016000
00020: 000000 031460 035724 000040 006000 031460 000000 035764
00030: 000040 016000 031460 035730 000000 000040 006000 031460
00040: 035764 000040 000000 016000 132400 034001 035776 033760
00050: 000000 152653 000440 017000 031460 000000 000000 000440
00060: 017340 031760 000000 000500 000000 017000 031460 036013
00070: 020040 005000 000000 001560 000000 000000 000000 000000
```

```
00100: SAME: TO 000200-1

*T RECORD 2055 (%4007, #807)
00000: 036000 060156 176725 000212 000000 000004 000440 017340
00010: 031760 000000 000000 000500 017000 031460 036013 120040
00020: 000000 005000 031760 154534 000440 017340 000000 071760
00030: 000000 000500 017070 036011 000000 036036 120040 002000
00040: 031460 035764 000000 000040 016000 031460 036060 000040
00050: 000000 006000 031460 035764 000040 016000 000000 031760
00060: 154534 000440 017340 152302 000000 010001 036014 031760
00070: 000000 000500 000000 017000 000000 000000 000000 000000
00100: SAME: TO 000200-1

*T RECORD 2056 (%4010, #808)
00000: 036000 060156 026050 000270 000000 071760 000000 000100
00010: 017070 036134 000000 034736 120040 002000 031460 035764
00020: 000000 000040 016000 143502 000400 154510 000000 000001
00030: 154511 034001 036020 031760 000000 154510 000440 017340
00040: 033760 000000 000000 000500 017000 121560 000001 000440
00050: 000000 017070 001560 036026 000440 017030 000000 031460
00060: 000000 000100 015000 031460 000000 000000 000040 007000
00070: 031460 036030 000000 000040 000000 000000 000000 000000
00100: SAME: TO 000200-1

*T RECORD 2057 (%4011, #809)
00000: 036000 060156 025577 000346 000000 016000 031460 036034
00010: 000040 016000 000000 031460 035470 000040 006000 031460
00020: 000000 036300 000040 006000 031460 034736 000000 000040
00030: 006000 031460 035764 000040 000000 016000 031460 036311
00040: 000040 006000 000000 031460 035764 000040 016000 104772
00050: 000000 034001 036036 033760 000003 000445 000000 017000
00060: 031460 005336 000040 006000 000000 001660 024570 000440
00070: 017300 031760 000000 000001 000000 000000 000000 000000
00100: SAME: TO 000200-1

*T RECORD 2058 (%4012, #80A)
00000: 036000 060156 066162 000424 000000 000440 017070 001565
00010: 000440 000440 000000 017170 031760 000400 000440 017170
00020: 000000 031760 000000 000440 017170 031760 000000 001400
00030: 000440 017170 031460 000000 000000 000040 037150 031760
00040: 001002 000440 000000 017340 031562 000000 000500 017070
00050: 000000 031460 000000 000040 037170 031460 000000 000000
00060: 000040 017040 041562 000000 000000 000500 017000 160370
00070: 034001 036054 000000 031460 000000 000000 000000 000000
00100: SAME: TO 000200-1

*T RECORD 2059 (%4013, #80B)
00000: 036000 060156 057215 000502 000000 036052 120040 005000
00010: 013465 000000 000000 000445 017000 031460 036037 114040
00020: 000000 005000 031460 000000 000040 007000 000000 033760
00030: 000003 000446 017000 033760 000000 154515 000440 017300
00040: 031466 000000 000000 002440 017175 031760 000200 000440
00050: 000000 017170 031760 000776 000440 017170 000000 031760
00060: 000003 000440 017170 031760 000000 000000 000440 017170
00070: 031460 025200 000000 000040 000000 000000 000000 000000
00100: SAME: TO 000200-1

*T RECORD 2060 (%4014, #80C)
```

433

```
00000: 036000 060156 122461 000560 000000 006000 031460 005336
00010: 000040 006000 000000 001660 024570 000440 017300 007557
00020: 000000 034001 036072 031760 000001 000440 000000 017070
00030: 031466 000000 000440 017170 000000 031760 000400 000440
00040: 017170 031760 000000 025000 000440 017170 031760 001400
00050: 000000 000440 017170 031460 000000 000040 000000 037150
00060: 031760 001002 000440 017340 000000 031562 000000 000500
00070: 017070 031460 000000 000000 000000 000000 000000 000000
00100: SAME: TO 000200-1


*T RECORD 2061 (%4015, #80D)
00000: 036000 060156 101061 000636 000000 000040 037170 031460
00010: 000000 000040 000000 017040 041562 000000 000500 017000
00020: 000000 031460 036103 120040 005000 013466 000000 000000
00030: 000446 017000 031460 036061 000000 114040 005000 126327
00040: 034001 036110 000000 043260 000000 000442 017000 031460
00050: 000000 036113 000040 006000 031460 000000 000000 000040
00060: 007000 033760 152653 000440 000000 017000 001560 000003
00070: 000440 017340 000000 033760 000000 000000 000000 000000
00100: SAME: TO 000200-1


*T RECORD 2062 (%4016, #80E)
00000: 036000 060156 104446 000714 000000 000000 000501 017000
00010: 033760 154515 000000 000440 017300 041260 000000 000440
00020: 000000 017170 031760 001000 000440 017170 000000 001561
00030: 000775 000440 017170 101760 000000 000000 000440 017170
00040: 031462 000000 000000 000440 017170 031460 025200 000040
00050: 000000 006000 031460 000000 000040 007000 000000 132711
00060: 034001 036126 033760 000003 000000 000441 017000 033760
00070: 100000 000442 000000 017000 000000 000000 000000 000000
00100: SAME: TO 000200-1


*T RECORD 2063 (%4017, #80F)
00000: 036000 060156 061575 000772 000000 031460 036116 000040
00010: 006000 013461 000000 000000 000441 017000 031460 036130
00020: 000000 120040 005000 031460 000000 000040 000000 007000
00030: 031460 036136 000040 006000 000000 031460 035764 000040
00040: 016000 033760 000000 025000 000441 017000 031460 036150
00050: 000000 000040 006000 033760 025400 000441 000000 017000
00060: 031460 036150 000040 006000 000000 033760 026000 000441
00070: 017000 031460 000000 036150 000000 000000 000000 000000
00100: SAME: TO 000200-1


*T RECORD 2064 (%4020, #810)
00000: 036000 060156 004607 001050 000000 000040 006000 073661
00010: 020001 036144 000000 033760 026400 000441 017000 031460
00020: 000000 036150 000040 006000 031460 036154 000000 000040
00030: 006000 031460 000000 000040 000000 007000 033760 000400
00040: 000440 017000 000000 013460 000000 000440 017030 001161
00050: 000000 000000 000040 017360 036151 000000 000000 020040
00060: 003000 005673 006000 154511 000000 000000 000400 001000
00070: 001400 000140 000000 000000 000000 000000 000000 000000
00100: SAME: TO 000200-1


*T RECORD 2065 (%4021, #811)
00000: 036000 060156 104763 001126 000000 001000 000000 000001
00010: 000000 025000 000000 000000 005652 034001 036154 033760
00020: 000000 000003 000441 017000 031460 036162 000000 000040
```

```
00030: 006000 113564 000400 000444 000000 017000 013461 000000
00040: 014441 007000 000000 031460 036174 000040 006000 031460
00050: 000000 036155 000040 016000 033760 152653 000000 000440
00060: 017000 001560 000003 000440 000000 017340 033760 000000
00070: 000500 017000 000000 001560 000000 000000 000000 000000
00100: SAME: TO 000200-1


*T RECORD 2066 (%4022, #812)
00000: 036000 060156 074142 001204 000000 154511 000440 017340
00010: 033760 000000 000000 000503 017000 001561 154511 000440
00020: 000000 017340 033760 000000 000504 017000 000000 003564
00030: 025000 000444 017000 126205 000000 034001 036172 031460
00040: 036174 000040 000000 006000 031460 000000 000040 007000
00050: 000000 033461 005336 000445 006000 001660 000000 024570
00060: 000440 017300 031760 000001 000000 000440 017070 031465
00070: 000000 000440 000000 017170 000000 000000 000000 000000
00100: SAME: TO 000200-1


*T RECORD 2067 (%4023, #813)
00000: 036000 060156 065270 001262 000000 031463 000000 000440
00010: 017170 031464 000000 000000 000440 017170 031760 000400
00020: 000000 000440 017170 031460 000000 000040 000000 037150
00030: 031760 001002 000440 017340 000000 031562 000000 000500
00040: 017070 031460 000000 000000 000040 037170 033465 000000
00050: 000000 000441 007000 004271 020001 ·036210 000000 031460
00060: 000000 000040 011000 033760 000000 000004 000440 017000
00070: 033760 000020 000000 000441 000000 000000 000000 000000
00100: SAME: TO 000200-1


*T RECORD 2068 (%4024, #814)
00000: 036000 060156 015263 001340 000000 017000 031460 030454
00010: 000040 016000 000000 031460 026462 000040 006000 031460
00020: 000000 027221 000040 006000 031460 026534 000000 000040
00030: 006000 031460 035764 000040 000000 016000 101334 004000
00040: 154525 100010 000000 000000 001000 000000 000600 000377
00050: 000000 000377 000000 057333 034001 036220 000000 033760
00060: 152653 000440 017000 001560 000000 000030 000440 017340
00070: 033760 000000 000000 000500 000000 000000 000000 000000
00100: SAME: TO 000200-1


*T RECORD 2069 (%4025, #815)
00000: 036000 060156 003313 001416 000000 017000 041560 002000
00010: 000440 017000 000000 031460 036255 020040 005000 041560
00020: 000000 001400 002440 017034 031460 036234 000000 020040
00030: 005000 033760 152653 000440 000000 017000 001560 000003
00040: 000440 017360 000000 031760 036366 000440 017030 031760
00050: 000000 135022 000440 017360 031460 000000 000000 000040
00060: 007000 101760 152653 000440 000000 017300 101760 000000
00070: 000440 017070 000000 032251 000000 000000 000000 000000
00100: SAME: TO 000200-1


*T RECORD 2070 (%4026, #816)
00000: 036000 060156 004233 001474 000000 034001 036236 031760
00010: 154524 000440 000000 017340 031760 000000 000500 017000
00020: 000000 031460 036245 020040 005000 031760 000000 000000
00030: 000440 017060 031760 154243 000000 000440 017300 031760
00040: 000014 000440 000000 017070 031460 034736 120040 006000
00050: 000000 031760 144276 000440 017340 031760 000000 000000
```

```
00060: 000500 017000 031460 036275 000000 020040 005000 033760
00070: 144271 000440 000000 017000 000000 000000 000000 000000
00100: SAME: TO 000200-1


*T RECORD 2071 (%4027, #817)
00000: 036000 060156 127677 001552 000000 031460 003050 000040
00010: 006000 033760 000000 144300 000440 017000 031460 003050
00020: 000000 000040 006000 013660 034001 036254 000000 031460
00030: 036275 000040 016000 041560 000000 001400 002440 017034
00040: 031460 036263 000000 120040 005000 033760 152653 000440
00050: 000000 017000 001560 000005 000440 017340 000000 031760
00060: 143026 000440 017360 031460 000000 036275 000040 016000
00070: 033760 152653 000000 000440 000000 000000 000000 000000
00100: SAME: TO 000200-1


*T RECORD 2072 (%4030, #818)
00000: 036000 060156 152103 001630 000000 017000 001560 000002
00010: 000440 017360 000000 031460 000000 000040 017160 001560
00020: 000000 000004 000440 017300 101760 000000 000000 000440
00030: 017070 031760 000007 000440 000000 017030 031760 143026
00040: 000440 017360 000000 014231 034001 036272 001560 000016
00050: 000000 000440 017340 031760 135023 000440 000000 017360
00060: 031460 036407 000040 006000 000000 031760 135022 000440
00070: 017300 031760 000000 026014 000000 000000 000000 000000
00100: SAME: TO 000200-1


*T RECORD 2073 (%4031, #819)
00000: 036000 060156 164401 001706 000000 000440 017070 031460
00010: 000000 000040 000000 007000 031460 034611 000040 006000
00020: 000000 031460 020742 000040 006000 031460 000000 035470
00030: 000040 006000 031760 100001 000000 000440 017030 031760
00040: 154463 000440 000000 017360 031460 034736 000040 006000
00050: 000000 031760 100002 000440 017030 031760 000000 154463
00060: 000440 017360 103642 014001 000000 036310 031460 000000
00070: 000040 007000 000000 033760 000000 000000 000000 000000
00100: SAME: TO 000200-1


*T RECORD 2074 (%4032, #81A)
00000: 036000 060156 051315 001764 000000 154616 000440 017000
00010: 031460 002745 000000 000040 006000 033760 154625 000440
00020: 000000 017000 031460 002745 000040 006000 000000 031460
00030: 000000 000040 007000 125425 000000 006000 154536 036532
00040: 036532 036464 000000 036354 036532 036352 036520 036500
00050: 000000 036532 036437 036343 036514 133656 000000 034001
00060: 036316 103760 000000 000440 000000 017000 031760 145656
00070: 000440 017340 000000 113560 000000 000000 000000 000000
00100: SAME: TO 000200-1


*T RECORD 2075 (%4033, #81B)
00000: 036000 060156 174163 002042 000000 000000 000500 017000
00010: 031760 143032 000000 000440 017340 003560 000000 000500
00020: 000000 017000 001560 154536 000440 017340 000000 031460
00030: 003616 000040 006000 031460 000000 000000 000040 007000
00040: 031760 143032 000000 000440 017340 033760 000000 000500
00050: 000000 017000 031460 036333 020040 005000 000000 113560
00060: 000013 000440 017000 031460 000000 036342 014040 005000
00070: 101760 152653 000000 000440 000000 000000 000000 000000
00100: SAME: TO 000200-1
```

```
*T RECORD 2076 (%4034, #81C)
00000: 036000 060156 022445 002120 000000 017340 046657 034001
00010: 036334 031760 000000 000000 000500 017000 031460 036340
00020: 000000 120040 005000 101760 143026 000440 000000 017340
00030: 031460 036342 000040 016260 000000 001560 154547 000440
00040: 017340 031460 000000 003616 000040 006000 031460 000000
00050: 000000 000040 007000 101760 143026 000440 000000 017340
00060: 033760 152653 000440 017260 000000 001560 000017 000440
00070: 017340 031460 000000 003616 000000 000000 000000 000000
00100: SAME: TO 000200-1

*T RECORD 2077 (%4035, #81D)
00000: 036000 060156 002464 002176 000000 000040 006000 031460
00010: 036136 000040 000000 006000 031460 026523 000040 006000
00020: 000000 031460 036532 000040 016000 116362 000000 034001
00030: 036352 101760 143026 000440 000000 017340 031460 036532
00040: 000040 016260 000000 101760 152653 000440 017300 041260
00050: 000000 000000 000440 017070 031460 036532 000000 000040
00060: 016000 033760 154616 000440 000000 017000 031460 002745
00070: 000040 006000 000000 033760 000000 000000 000000 000000
00100: SAME: TO 000200-1

*T RECORD 2078 (%4036, #81E)
00000: 036000 060156 061272 002254 000000 154552 000440 017000
00010: 031460 002745 000000 000040 006000 033760 154563 000440
00020: 000000 017000 031460 002745 000040 006000 000000 031460
00030: 036532 000040 016000 031760 000000 154524 000440 017300
00040: 031760 000001 000000 000440 017070 005310 034001 036370
00050: 000000 031760 000007 000440 017030 031760 000000 143026
00060: 000440 017360 033760 152653 000000 000440 017000 001560
00070: 000001 000440 000000 017300 000000 000000 000000 000000
00100: SAME: TO 000200-1

*T RECORD 2079 (%4037, #81F)
00000: 036000 060156 065611 002332 000000 031760 000000 000440
00010: 017070 001560 000000 000004 000440 017300 031760 000001
00020: 000000 000440 017070 001560 000016 000440 000000 017340
00030: 031760 135023 000440 017360 000000 031760 135022 000440
00040: 017300 031760 000000 026014 000440 017070 033760 154552
00050: 000000 000440 017000 031460 002745 000040 000000 006000
00060: 033760 154563 000440 017000 000000 024447 034001 036406
00070: 031460 002745 000000 000040 000000 000000 000000 000000
00100: SAME: TO 000200-1

*T RECORD 2080 (%4040, #820)
00000: 036000 060156 054232 002410 000000 006000 031460 036300
00010: 000040 006000 000000 033760 154574 000440 017000 031460
00020: 000000 002745 000040 006000 033760 154605 000000 000440
00030: 017000 031460 002745 000040 000000 006000 031760 154534
00040: 000440 017340 000000 031760 000000 000500 017000 031460
00050: 000000 036436 020040 005000 041260 000000 000000 000440
00060: 017070 031460 036060 000040 000000 006000 031760 177777
00070: 000440 017030 000000 031760 000000 000000 000000 000000
00100: SAME: TO 000200-1

*T RECORD 2081 (%4041, #821)
00000: 036000 060156 050361 002466 000000 101416 000440 017360
```

437

```
00010: 031460 000000 000000 000040 017160 057075 034001 036424
00020: 000000 033760 074402 000440 017000 001560 000000 000007
00030: 001440 017340 033760 000000 000000 000500 017000 043560
00040: 177774 000440 000000 017000 031560 000001 000440 017070
00050: 000000 031460 036435 150040 005000 031760 000000 101362
00060: 000440 017300 033760 000007 000000 001440 017000 001560
00070: 100001 000440 000000 017070 000000 000000 000000 000000
00100: SAME: TO 000200-1


*T RECORD 2082 (%4042, #822)
00000: 036000 060156 060623 002544 000000 031460 000000 000040
00010: 017000 031460 000000 000000 000040 007000 033760 152653
00020: 000000 000440 017000 101460 000000 000440 000000 017300
00030: 041260 000000 000440 017070 000000 022244 034001 036442
00040: 031460 036311 000000 000040 006000 033760 152653 000440
00050: 000000 017000 001560 000017 000440 017340 000000 031460
00060: 003616 000040 006000 031460 000000 036113 000040 006000
00070: 033760 152653 000000 000440 000000 000000 000000 000000
00100: SAME: TO 000200-1


*T RECORD 2083 (%4043, #823)
00000: 036000 060156 153057 002622 000000 017000 001560 000005
00010: 000440 017340 000000 031760 143026 000440 017360 001560
00020: 000000 000002 000440 017340 103760 000000 000000 000501
00030: 017000 041561 000003 000440 000000 017170 041260 000000
00040: 000440 017170 000000 001560 000015 000440 017340 031760
00050: 000000 135023 000440 017360 173673 034001 000000 036460
00060: 001560 000003 000440 017340 000000 031760 000000 000500
00070: 017000 031460 000000 036136 000000 000000 000000 000000
00100: SAME: TO 000200-1


*T RECORD 2084 (%4044, #824)
00000: 036000 060156 011155 002700 000000 120040 006000 031460
00010: 036532 000040 000000 016000 031460 036036 000040 006000
00020: 000000 033760 152653 000440 017000 001560 000000 000003
00030: 000440 017340 101760 000000 000000 000440 017070 041260
00040: 000000 000440 000000 017270 101760 143026 000440 017340
00050: 000000 031460 000000 000040 017260 001560 000000 000017
00060: 000440 017340 031460 003616 000000 000040 006000 031460
00070: 036126 000040 000000 006000 000000 000000 000000 000000
00100: SAME: TO 000200-1


*T RECORD 2085 (%4045, #825)
00000: 036000 060156 110127 002756 000000 147640 034001 036476
00010: 031460 026523 000000 000040 006000 031460 036532 000040
00020: 000000 016000 031460 036036 000040 006000 000000 033760
00030: 152653 000440 017000 001560 000000 000003 000440 017340
00040: 101760 000000 000000 000440 017070 041260 000000 000440
00050: 000000 017270 101760 143026 000440 017340 000000 031460
00060: 000000 000040 017260 001560 000000 000017 000440 017340
00070: 031460 003616 000000 000040 000000 000000 000000 000000
00100: SAME: TO 000200-1


*T RECORD 2086 (%4046, #826)
00000: 036000 060156 121004 003034 000000 006000 031460 036126
00010: 000040 006000 000000 031460 026523 000040 006000 031460
00020: 000000 036357 000040 016000 121342 031000 000000 154552
00030: 100010 000000 001000 000000 000000 000600 000000 000000
```

438

```
00040: 000000 000000 000000 100011 000000 001000 000000 000600
00050: 000000 000000 000000 000000 000000 100012 000000 000000
00060: 001000 000000 000600 000000 000000 000000 000000 000000
00070: 100013 000000 000000 001000 000000 000000 000000 000000
00100: SAME: TO 000200-1

*T RECORD 2087 (%4047, #827)
00000: 036000 060156 012712 003112 000000 000000 000600 000000
00010: 000000 000000 000000 000000 100002 000000 001000 000000
00020: 000000 000600 000000 000000 100001 000050 000000 000742
00030: 000062 000310 000000 000000 000000 167027 034001 036514
00040: 101760 152653 000000 000440 017300 041260 000000 000440
00050: 000000 017070 031460 036060 000040 006000 000000 031460
00060: 036311 000040 006000 033760 000000 152653 000440 017000
00070: 041260 000000 000000 000440 000000 000000 000000 000000
00100: SAME: TO 000200-1

*T RECORD 2088 (%4050, #828)
00000: 036000 060156 140376 003170 000000 017030 001560 000004
00010: 000440 017360 000000 031460 000000 000040 017140 031760
00020: 000000 143026 000440 017360 001560 000015 000000 000440
00030: 017340 031760 135023 000440 000000 017360 001560 000017
00040: 000440 017340 000000 031460 003616 000040 006000 031460
00050: 000000 026523 000040 006000 033345 006001 000000 036532
00060: 031760 101415 000440 017300 000000 033760 130062 000440
00070: 017000 041260 000000 001427 000000 000000 000000 000000
00100: SAME: TO 000200-1

*T RECORD 2089 (%4051, #829)
00000: 004000 060103 001331 003246 000000 000440 016070 077230
00010: 000000 000000 000000 000000 000000 000000 000000 000000
00020: SAME: TO 000200-1

*T RECORD 2090 (%4052, #82A)
00000: 002000 120000 120000 000000 000000 000000 000000 000000
00010: SAME: TO 000200-1

*T RECORD 2091 (%4053, #82B)
00000: 025000 020000 060014 077101 044522 041040 007427 000000
00010: SAME: TO 000020-1
00020: 000000 020101 044522 041122 052523 044040 050101 041513
00030: 040507 042440 020040 044517 047111 020074 034067 030061
00040: 030067 027061 030465 031476 020040 020040 020040 020040
00050: 020040 020040 000000 000000 000000 000000 000000 000000
00060: SAME: TO 000200-1

*T RECORD 2092 (%4054, #82C)
00000: 003400 040001 044624 077101 044522 041000 000000 000000
00010: SAME: TO 000200-1

*T RECORD 2093 (%4055, #82D)
00000: 036000 060156 126675 000000 000000 007426 034001 032766
00010: 031760 164424 000000 000440 017340 033760 000000 000507
00020: 000000 017000 031460 033033 014040 005000 000000 111567
00030: 000011 000440 017000 031460 000000 033033 140040 005000
00040: 031460 003577 000000 000040 006000 031460 033025 050040
00050: 000000 005000 031460 033034 000040 006000 000000 031460
00060: 033033 050040 005000 031460 000000 002146 000040 006000
```

```
00070: 041260 000000 000000 000440 000000 000000 000000 000000
00100: SAME: TO 000200-1


*T RECORD 2094 (%4056, #82E)
00000: 036000 060156 073641 000056 000000 017030 101760 135023
00010: 000440 017360 000000 031760 164424 000440 017340 033760
00020: 000000 000000 000500 017000 013227 034001 000000 033004
00030: 031460 033010 120040 005000 000000 031760 000000 000440
00040: 017030 031460 000000 002514 000040 006000 031460 033013
00050: 000000 000040 016000 111560 000002 000440 000000 017000
00060: 031460 033014 120040 005000 000000 031760 000001 000440
00070: 017030 031460 000000 002514 000000 000000 000000 000000
00100: SAME: TO 000200-1


*T RECORD 2095 (%4057, #82F)
00000: 036000 060156 054335 000134 000000 000040 006000 031760
00010: 164426 000440 000000 017340 031760 000000 000500 017000
00020: 000000 031460 033023 120040 005000 111567 000000 000005
00030: 000440 017000 031460 033023 000000 014040 005000 031460
00040: 034223 000040 000000 006000 016651 034001 033022 031460
00050: 000000 033033 000040 016000 031460 033075 000000 000040
00060: 006000 031460 033033 000040 000000 016000 031760 000001
00070: 000440 017030 000000 031460 000000 000000 000000 000000
00100: SAME: TO 000200-1


*T RECORD 2096 (%4060, #830)
00000: 036000 060156 055657 000212 000000 002514 000040 006000
00010: 031760 164431 000000 000440 017340 031760 000000 000500
00020: 000000 017000 031460 035352 120040 006000 000000 031460
00030: 026044 000040 006000 031460 000000 000000 000040 007000
00040: 033760 134721 000000 000457 017340 033760 000000 000512
00050: 000000 017140 033760 000000 000513 017000 000000 031760
00060: 176422 000440 017340 133430 000000 034001 033040 035760
00070: 000000 000501 000000 017003 000000 000000 000000 000000
00100: SAME: TO 000200-1


*T RECORD 2097 (%4061, #831)
00000: 036000 060156 110207 000270 000000 003441 000000 030440
00010: 017000 031760 000000 176420 000440 017340 033760 000000
00020: 000000 000502 017000 041562 000040 000440 000000 017000
00030: 031460 033052 020040 005000 000000 041562 000010 000440
00040: 017000 031460 000000 033051 020040 005000 031460 033052
00050: 000000 000040 016000 043260 000000 000440 000000 017000
00060: 031460 034603 000040 006000 000000 031460 033074 050040
00070: 005000 031760 000000 164426 000000 000000 000000 000000
00100: SAME: TO 000200-1


*T RECORD 2098 (%4062, #832)
00000: 036000 060156 173114 000346 000000 000440 017340 031760
00010: 000000 000500 000000 017000 031745 034001 033056 031460
00020: 000000 033074 120040 005000 111567 000001 000000 000440
00030: 017000 031460 033074 120040 000000 005000 031760 164432
00040: 000440 017340 000000 033760 000000 000503 017140 033760
00050: 000000 000000 000504 017000 031760 164427 000000 000440
00060: 017340 031760 000000 000500 000000 017000 031460 033071
00070: 020040 005000 000000 113163 000000 000000 000000 000000
00100: SAME: TO 000200-1
```

```
*T RECORD 2099 (%4063, #833)
00000: 036000 060156 141503 000424 000000 000000 000452 017000
00010: 113164 033073 000000 000453 016000 033463 000000 000452
00020: 000000 017000 033464 000000 000453 017000 000000 031460
00030: 034603 000040 006000 162165 000000 034001 033074 031460
00040: 000000 000040 000000 007000 031760 164426 000440 017340
00050: 000000 031760 000000 000500 017000 043260 000000 033101
00060: 020452 005000 033760 001000 000000 000452 017000 031760
00070: 134721 000440 000000 017340 000000 000000 000000 000000
00100: SAME: TO 000200-1

*T RECORD 2100 (%4064, #834)
00000: 036000 060156 164012 000502 000000 003572 000000 000512
00010: 017140 033760 000000 000000 000513 017000 031760 164305
00020: 000000 000440 017300 113572 000043 000452 000000 017070
00030: 113573 000043 000453 017170 000000 031760 164330 000440
00040: 017300 101760 000000 000000 000440 017070 111567 000001
00050: 000000 000440 017000 151164 034001 033112 000000 031460
00060: 033125 120040 005000 031760 000000 164432 000440 017340
00070: 033760 000000 000000 000500 000000 000000 000000 000000
00100: SAME: TO 000200-1

*T RECORD 2101 (%4065, #835)
00000: 036000 060156 031333 000560 000000 017140 033760 000000
00010: 000501 017000 000000 031760 164427 000440 017340 031760
00020: 000000 000000 000500 017000 031460 033123 000000 020040
00030: 005000 113160 000000 000452 000000 017000 113161 033125
00040: 000453 016000 000000 113560 000043 000452 017000 113561
00050: 000000 000043 000453 017000 031760 164303 000000 000440
00060: 017300 031472 000000 000440 000000 017070 031473 000000
00070: 000440 017170 000000 044223 000000 000000 000000 000000
00100: SAME: TO 000200-1

*T RECORD 2102 (%4066, #836)
00000: 036000 060156 100517 000636 000000 034001 033130 031760
00010: 164440 000440 000000 017340 033760 000000 000510 017000
00020: 000000 043260 000000 000456 017000 001576 000000 176204
00030: 000440 017340 033760 000000 000000 000514 017000 001576
00040: 176312 000440 000000 017340 033760 033143 000511 006000
00050: 000000 031460 033207 000040 006000 103476 000000 000000
00060: 000456 017000 111576 000106 000000 000440 017000 033133
00070: 000000 114040 000000 003000 000000 000000 000000 000000
00100: SAME: TO 000200-1

*T RECORD 2103 (%4067, #837)
00000: 036000 060156 076724 000714 000000 031760 164305 000440
00010: 017340 003576 000000 000000 000512 017140 003574 000000
00020: 000000 000513 017000 070746 034001 033146 000000 031471
00030: 000000 000440 017000 031460 000000 033206 020040 005000
00040: 031760 164324 000000 000440 017300 031473 000000 000440
00050: 000000 017170 031471 000000 000440 017170 000000 031472
00060: 000000 000440 017170 031460 000000 000000 000040 017100
00070: 041260 000000 000000 000440 000000 000000 000000 000000
00100: SAME: TO 000200-1

*T RECORD 2104 (%4070, #838)
00000: 036000 060156 044263 000772 000000 017170 031760 146307
00010: 000440 017170 000000 033760 164324 000440 017000 031460
```

441

```
00020: 000000 025200 000040 006000 031760 164425 000000 000440
00030: 017340 031760 000000 000500 000000 017000 031460 033173
00040: 020040 005000 000000 171612 034001 033164 031760 164333
00050: 000000 000440 017300 031473 000000 000440 000000 017170
00060: 031471 000000 000440 017170 000000 031472 000000 000440
00070: .017170 041260 000000 000000 000000 000000 000000 000000
00100: SAME: TO 000200-1


*T RECORD 2105 (%4071, #839)
00000: 036000 060156 103210 001050 000000 000440 017170 033760
00010: 164333 000440 000000 017000 031460 025314 000040 006000
00020: 000000 111567 000003 000440 017000 031460 000000 033177
00030: 020040 005000 111567 000004 000000 000440 017000 031460
00040: 033206 120040 000000 005000 031760 164347 000440 017300
00050: 000000 031473 000000 000440 017170 031471 000000 000000
00060: 000440 017170 063431 034001 000000 033202 031472 000000
00070: 000440 017170 000000 041260 000000 000000 000000 000000
00100: SAME: TO 000200-1


*T RECORD 2106 (%4072, #83A)
00000: 036000 060156 141627 001126 000000 000000 000440 017170
00010: 033760 164347 000000 000440 017000 031460 025314 000040
00020: 000000 006000 031460 000000 000040 007000 000000 031471
00030: 000000 000440 017000 031460 000000 033430 020040 005000
00040: 111567 000001 000000 000440 017000 031460 033263 120040
00050: 000000 005000 031760 164303 000440 017340 000000 003576
00060: 000000 000505 017140 003574 000000 000000 000506 017000
00070: 031760 164324 000000 000440 000000 000000 000000 000000
00100: SAME: TO 000200-1


*T RECORD 2107 (%4073, #83B)
00000: 036000 060156 015137 001204 000000 017300 031466 000000
00010: 000440 017170 000000 117145 034001 033220 031471 000000
00020: 000000 000440 017170 031465 000000 000440 000000 017170
00030: 031460 000000 000040 017100 000000 041260 000000 000440
00040: 017170 031760 000000 164037 000440 017170 033760 164324
00050: 000000 000440 017000 031460 025200 000040 000000 006000
00060: 031760 164425 000440 017340 000000 031760 000000 000500
00070: 017000 031460 000000 033263 000000 000000 000000 000000
00100: SAME: TO 000200-1


*T RECORD 2108 (%4074, #83C)
00000: 036000 060156 020630 001262 000000 020040 005000 031760
00010: 164341 000440 000000 017300 031466 000000 000440 017170
00020: 000000 031471 000000 000440 017170 031465 000000 000000
00030: 000440 017170 147266 034001 000000 033236 041260 000000
00040: 000440 017170 000000 033760 164341 000440 017000 031460
00050: 000000 025314 000040 006000 031760 164355 000000 000440
00060: 017300 031466 000000 000440 000000 017170 031471 000000
00070: 000440 017170 000000 031465 000000 000000 000000 000000
00100: SAME: TO 000200-1


*T RECORD 2109 (%4075, #83D)
00000: 036000 060156 025166 001340 000000 000000 000440 017170
00010: 041260 000000 000000 000440 017170 033760 164355 000440
00020: 000000 017000 031460 025314 000040 006000 000000 033760
00030: 164260 005442 017000 031460 000000 033553 000040 006000
00040: 031760 164355 000000 000440 017300 031473 000000 000440
```

```
00050: 000000 017170 152212 034001 033254 031471 000000 000000
00060: 000440 017170 031472 000000 000000 000440 017170 041260
00070: 000000 000440 000000 017170 000000 000000 000000 000000
00100: SAME: TO 000200-1

*T RECORD 2110 (%4076, #83E)
00000: 036000 060156 056616 001416 000000 033760 164355 000440
00010: 017000 031460 000000 025314 000040 006000 033760 164253
00020: 000000 005442 017000 031460 033553 000040 000000 006000
00030: 043260 000000 000446 017000 000000 043260 000000 000445
00040: 017000 033760 000000 000106 000440 017000 030476 003435
00050: 000000 000440 006000 003660 164540 000440 000000 017000
00060: 001160 000000 000454 017030 000000 031760 164314 000440
00070: 017360 100124 000000 034001 000000 000000 000000 000000
00100: SAME: TO 000200-1

*T RECORD 2111 (%4077, #83F)
00000: 036000 060156 061635 001474 000000 033272 121165 000000
00010: 000451 017000 000000 031460 033365 114040 005000 031760
00020: 000000 164425 000440 017340 031760 000000 000000 000500
00030: 017000 031460 033302 020040 000000 005000 031760 164253
00040: 000440 017300 000000 033465 034620 000440 006000 031460
00050: 000000 033365 150040 005000 031760 164426 000000 000440
00060: 017340 031760 000000 000500 000000 017000 031460 033364
00070: 120040 005000 000000 031760 000000 000000 000000 000000
00100: SAME: TO 000200-1

*T RECORD 2112 (%4100, #840)
00000: 036000 060156 175052 001552 000000 164314 000440 017340
00010: 001565 000000 000000 000500 017340 033760 000000 000504
00020: 000000 017000 101610 034001 033310 031460 000000 033364
00030: 020040 005000 111567 000003 000000 000440 017000 031460
00040: 033315 020040 000000 005000 111567 000004 000440 017000
00050: 000000 031460 033322 120040 005000 031760 000000 164272
00060: 000440 017300 033465 034620 000000 000440 006000 031460
00070: 033365 050040 000000 005000 000000 000000 000000 000000
00100: SAME: TO 000200-1

*T RECORD 2113 (%4101, #841)
00000: 036000 060156 160320 001630 000000 031760 164272 000440
00010: 017300 033465 000000 034625 000440 006000 031464 000000
00020: 000000 000440 017030 033760 000003 000444 000000 017000
00030: 031760 164307 000440 017360 000000 037465 000000 000457
00040: 017002 053130 000000 034001 033326 001577 146307 000440
00050: 000000 017300 003577 164037 000440 017000 000000 035464
00060: 000000 000457 017002 001577 000000 000000 032520 017300
00070: 003177 000000 000000 000440 000000 000000 000000 000000
00100: SAME: TO 000200-1

*T RECORD 2114 (%4102, #842)
00000: 036000 060156 173362 001706 000000 017000 033760 000377
00010: 000443 017000 000000 033760 033336 054537 005040 031760
00020: 000000 000000 002500 017034 043563 000000 000000 000502
00030: 017000 031460 033341 054440 000000 005340 031760 000000
00040: 002500 017034 000000 043563 000000 000503 017000 001564
00050: 000000 164456 000440 017340 041570 000000 000000 000500
00060: 017000 170432 034001 033344 000000 031460 033353 120040
00070: 005000 031760 000000 164307 000000 000000 000000 000000
```

```
00100: SAME: TO 000200-1

*T RECORD 2115 (%4103, #843)
00000: 036000 060156 062233 001764 000000 000440 017340 033760
00010: 000000 000500 000000 017000 001564 164434 000440 017340
00020: 000000 033760 000000 000501 017000 001567 000000 164446
00030: 000440 017340 031460 003616 000000 000040 006000 031477
00040: 033357 054440 000000 005340 033760 000377 000443 017000
00050: 000000 041563 000000 002500 017034 031562 000000 033362
00060: 002500 016074 033760 177400 000000 000443 017000 041563
00070: 000000 000500 000000 017030 000000 000000 000000 000000
00100: SAME: TO 000200-1

*T RECORD 2116 (%4104, #844)
00000: 036000 060156 102160 002042 000000 031562 000000 000500
00010: 017070 135371 000000 034001 033362 013464 000000 000444
00020: 000000 017000 031460 033325 114040 005000 000000 103465
00030: 033272 000445 016000 031760 000000 164426 000440 017340
00040: 031760 000000 000000 000500 017000 033472 033371 020443
00050: 000000 005000 113572 001000 000443 017000 000000 033465
00060: 000000 000442 017000 113166 000000 000000 000442 017000
00070: 037466 033412 000000 020441 000000 000000 000000 000000
00100: SAME: TO 000200-1

*T RECORD 2117 (%4105, #845)
00000: 036000 060156 144113 002120 000000 005002 031760 164324
00010: 000440 017300 000000 001173 000000 000446 017170 031462
00020: 000000 000000 000440 017170 031463 000000 000000 000440
00030: 017170 164120 034001 033400 000000 031460 000000 000040
00040: 017100 031760 000000 100000 000440 017170 001561 146307
00050: 000000 000440 017170 033760 164324 000440 000000 017000
00060: 031460 025200 000040 006000 000000 031760 164401 000440
00070: 017300 001173 000000 000000 000000 000000 000000 000000
00100: SAME: TO 000200-1

*T RECORD 2118 (%4106, #846)
00000: 036000 060156 022023 002176 000000 000446 017170 031462
00010: 000000 000440 000000 017170 033760 164401 000440 017000
00020: 000000 031463 025723 000440 006170 103465 000000 000000
00030: 000446 017000 121165 000000 000000 000451 017000 031460
00040: 033364 014040 000000 005000 111567 000003 000440 017000
00050: 000000 175326 034001 033416 031460 033421 000000 020040
00060: 005000 111567 000004 000440 000000 017000 031460 033430
00070: 120040 005000 000000 031760 000000 000000 000000 000000
00100: SAME: TO 000200-1

*T RECORD 2119 (%4107, #847)
00000: 036000 060156 127223 002254 000000 164347 000440 017300
00010: 031473 000000 000000 000440 017170 031471 000000 000440
00020: 000000 017170 031463 000000 000440 017170 000000 101760
00030: 000000 000440 017170 033760 000000 164347 000440 017000
00040: 031460 025314 000000 000040 006000 031460 000000 000040
00050: 000000 007000 113162 000000 000441 017000 000000 023740
00060: 000000 114043 017000 003443 000000 000000 140443 017000
00070: 150137 034001 000000 033434 000000 000000 000000 000000
00100: SAME: TO 000200-1

*T RECORD 2120 (%4110, #848)
```

444

EP 0 455 351 A2

```
00000: 036000 060156 170646 002332 000000 111560 077777 000440
00010: 017000 031460 000000 033443 020040 005000 030461 003435
00020: 000000 000440 006000 036461 000000 000441 000000 017003
00030: 031461 000000 000440 017000 000000 031460 033443 120040
00040: 005000 033463 000000 000000 000441 017000 003161 034565
00050: 000000 000442 006000 031460 000000 000040 000000 007000
00060: 031464 000000 000440 017030 000000 031465 000000 000500
00070: 015030 033460 000000 000000 000000 000000 000000 000000
00100: SAME: TO 000200-1

*T RECORD 2121 (%4111, #849)
00000: 036000 060156 155734 002410 000000 000504 015000 033461
00010: 000000 000445 000000 017000 033461 033472 020440 005000
00020: 000000 147237 034001 033452 120563 000377 000000 000440
00030: 017000 031460 003435 000040 000000 006000 033760 000200
00040: 000440 017000 000000 031465 000000 000440 017000 031460
00050: 000000 033460 115040 005000 123460 000000 000000 000440
00060: 017000 000060 000000 000440 000000 017000 003441 000000
00070: 024441 017000 000000 034461 000000 000000 000000 000000
00100: SAME: TO 000200-1

*T RECORD 2122 (%4112, #84A)
00000: 036000 060156 023662 002466 000000 000000 000441 017003
00010: 041660 177600 000000 001440 017037 033760 033466 050501
00020: 000000 005000 033561 177400 000441 017000 000000 031461
00030: 000000 000440 017000 031460 000000 033471 120040 005000
00040: 067407 034001 000000 033470 103760 000000 000441 017000
00050: 000000 113161 000000 000443 017000 111564 000000 077777
00060: 000440 017000 031460 033513 000000 020040 005000 113162
00070: 000000 000443 000000 017000 000000 000000 000000 000000
00100: SAME: TO 000200-1

*T RECORD 2123 (%4113, #84B)
00000: 036000 060156 036035 002544 000000 033463 000000 000440
00010: 017000 030464 000000 003435 000440 006000 031460 034552
00020: 000000 000040 006000 031463 000000 000440 000000 017000
00030: 031460 033511 020040 005000 000000 031460 033505 014040
00040: 005000 103760 000000 000000 000444 017000 031460 033506
00050: 000000 000040 016000 023760 000000 000444 000000 017000
00060: 006535 034001 033506 031461 000000 000000 000440 017000
00070: 031460 033511 000000 120040 000000 000000 000000 000000
00100: SAME: TO 000200-1

*T RECORD 2124 (%4114, #84C)
00000: 036000 060156 016507 002622 000000 005000 003164 000000
00010: 000442 017000 000000 033461 000000 000443 017000 003162
00020: 000000 000000 000443 017000 033463 034565 000000 000442
00030: 006000 031460 000000 000040 000000 011000 033760 000000
00040: 000405 011000 000000 033760 000000 000404 007000 031464
00050: 000000 000000 000440 017030 033460 000000 000000 000503
00060: 015000 030461 000000 000440 000000 017000 033462 033543
00070: 020440 005000 000000 023740 000000 000000 000000 000000
00100: SAME: TO 000200-1

*T RECORD 2125 (%4115, #84D)
00000: 036000 060156 161237 002700 000000 000000 114044 017000
00010: 000633 034001 000000 033524 003444 000000 140444 017000
00020: 000000 123562 000377 000440 017000 031460 000000 003435
```

445

```
00030: 000040 006000 034461 000000 000000 000441 017003 033463
00040: 003435 000440 000000 006000 031461 000000 000440 017000
00050: 000000 031460 033540 014040 005000 003561 000000 000040
00060: 000441 017000 041561 177700 000000 001440 017036 031760
00070: 000000 000500 000000 017000 000000 000000 000000 000000
00100: SAME: TO 000200-1

*T RECORD 2126 (%4116, #84E)
00000: 036000 060156 064045 002756 000000 031460 033542 120040
00010: 005000 031464 000000 033542 000440 016030 113561 000040
00020: 000000 000441 017000 031561 000077 001440 000000 017036
00030: 032321 034001 033542 113562 000000 034565 000502 006000
00040: 031460 000000 000000 000040 011000 033760 000000 000404
00050: 000000 007000 111560 077777 000440 017000 000000 031460
00060: 033551 020040 005000 030461 000000 003435 000440 006000
00070: 036461 000000 000000 000441 000000 000000 000000 000000
00100: SAME: TO 000200-1

*T RECORD 2127 (%4117, #84F)
00000: 036000 060156 176720 003034 000000 017003 003161 034565
00010: 000442 006000 000000 031460 000000 000040 007000 040260
00020: 000000 000000 000440 017000 033471 000000 000000 000441
00030: 017000 034461 000002 000641 000000 017003 031260 000000
00040: 000440 017000 000000 013441 000000 120441 017000 150105
00050: 000000 034001 033560 001561 164265 000440 000000 017340
00060: 033760 000000 000500 017000 000000 001162 033564 050441
00070: 005340 041560 000000 033565 000000 000000 000000 000000
00100: SAME: TO 000200-1

*T RECORD 2128 (%4120, #850)
00000: 036000 060156 150327 003112 000000 000500 016070 031560
00010: 000000 000500 000000 017070 013461 000000 000441 017000
00020: 000000 031460 033560 114040 005000 031460 000000 000000
00030: 000040 007000 031460 000000 000000 000040 007000 031460
00040: 026014 000040 000000 006000 031760 164426 000440 017340
00050: 000000 021760 000000 000500 017000 031460 000000 033743
00060: 020040 005000 033760 000001 000000 000447 017000 134601
00070: 034001 033576 000000 031460 000000 000000 000000 000000
00100: SAME: TO 000200-1

*T RECORD 2129 (%4121, #851)
00000: 036000 060156 104124 003170 000000 033034 000040 006000
00010: 031460 033743 000000 050040 005000 031760 134721 000440
00020: 000000 017340 033760 000000 000500 017140 000000 033760
00030: 000000 000501 017000 031760 000000 164312 000440 017340
00040: 033760 000000 000000 000502 017140 033760 000000 000503
00050: 000000 017000 031461 000000 000440 017070 000000 031460
00060: 000000 000440 017270 121160 000000 000000 000442 017000
00070: 031460 033613 000000 120040 000000 000000 000000 000000
00100: SAME: TO 000200-1

*T RECORD 2130 (%4122, #852)
00000: 036000 060156 046742 003246 000000 005000 121161 000000
00010: 000443 017000 000000 003740 000000 120444 017000 017264
00020: 000000 034001 033614 031760 164430 000440 000000 017340
00030: 033760 000000 000503 017000 000000 041260 000000 000440
00040: 017070 031163 000000 000000 000444 017000 041260 033743
00050: 000000 020440 005070 031463 000000 000440 000000 017000
```

```
00060: 031460 033626 120040 005000 000000 031760 164427 000440
00070: 017340 031760 000000 000000 000000 000000 000000 000000
00100: SAME: TO 000200-1


*T RECORD 2131 (%4123, #853)
00000: 036000 060156 036547 003324 000000 000500 017000 031460
00010: 033743 020040 000000 005000 031460 033744 000040 006000
00020: 000000 031760 144742 000440 017340 033760 000000 000002
00030: 000454 017000 121574 000000 000000 000500 017000 060324
00040: 034001 033632 000000 043260 033634 120454 005000 033760
00050: 000000 001000 000454 017000 031760 164432 000000 000440
00060: 017340 033760 000000 000512 000000 017140 033760 000000
00070: 000513 017000 000000 031760 000000 000000 000000 000000
00100: SAME: TO 000200-1


*T RECORD 2132 (%4124, #854)
00000: 036000 060156 045706 003402 000000 164427 000440 017340
00010: 031760 000000 000000 000500 017000 031460 033646 020040
00020: 000000 005000 031760 134721 000440 017340 000000 123572
00030: 000000 000512 017000 113174 000000 000000 000452 017140
00040: 123573 000000 000000 000513 017000 031760 164372 000440
00050: 000000 017300 031473 000000 000440 017170 000000 126050
00060: 034001 033650 101760 000000 000000 000440 017170 031472
00070: 000000 000440 000000 017170 000000 000000 000000 000000
00100: SAME: TO 000200-1


*T RECORD 2133 (%4125, #855)
00000: 036000 060156 041071 003460 000000 101760 000000 000440
00010: 017170 033760 000000 164372 000440 017000 031460 002745
00020: 000000 000040 006000 113573 000043 000453 000000 017000
00030: 113572 000043 000452 017000 000000 031760 164310 000440
00040: 017300 031472 000000 000000 000440 017070 031473 000000
00050: 000000 000440 017170 043260 000000 000456 000000 017000
00060: 043260 000000 000450 017000 000000 043260 000000 000447
00070: 017000 031760 000000 176312 000000 000000 000000 000000
00100: SAME: TO 000200-1


*T RECORD 2134 (%4126, #856)
00000: 036000 060156 175747 003536 000000 000440 017340 024235
00010: 034001 033666 000000 033760 000000 000504 017140 033760
00020: 000000 000000 000505 017000 001576 176204 000000 000440
00030: 017340 033760 000000 000514 000000 017000 033464 000000
00040: 000451 017000 000000 111576 000104 000440 017000 033465
00050: 000000 033676 014444 005000 043260 033701 000000 000445
00060: 016000 003576 176312 000445 000000 017000 001565 000002
00070: 000440 017340 000000 033760 000000 000000 000000 000000
00100: SAME: TO 000200-1


*T RECORD 2135 (%4127, #857)
00000: 036000 060156 050627 003614 000000 000000 000505 017000
00010: 031471 000000 000000 000440 017000 031460 033737 020040
00020: 000000 005000 003173 000000 000454 017000 000000 037761
00030: 034001 033704 033760 000002 000000 000446 017000 031470
00040: 000000 000440 000000 017000 031460 033715 020040 005000
00050: 000000 031467 000000 000440 017000 031460 000000 033715
00060: 020040 005000 031465 000000 000000 000440 017000 031460
00070: 033715 020040 000000 005000 000000 000000 000000 000000
00100: SAME: TO 000200-1
```

447

```
*T RECORD 2136 (%4130, #858)
00000: 036000 060156 062166 003672 000000 031464 000000 000440
00010: 017000 031460 000000 033716 120040 005000 033471 000000
00020: 000000 000446 017000 031760 164372 000440 000000 017300
00030: 031474 000000 000440 017170 000000 031466 000000 000440
00040: 017170 031472 000000 000000 000440 017170 034106 034001
00050: 000000 033722 101760 000000 000440 017170 000000 033760
00060: 164372 000440 017000 031460 000000 002745 000040 006000
00070: 033467 000000 000000 000450 000000 000000 000000 000000
00100: SAME: TO 000200-1

*T RECORD 2137 (%4131, #859)
00000: 036000 060156 171717 003750 000000 017000 033471 000000
00010: 000447 017000 000000 113166 000000 000451 017000 031760
00020: 000000 164372 000440 017300 001174 000000 000000 000451
00030: 017170 031466 000000 000440 000000 017170 031472 000000
00040: 000440 017170 000000 101760 000000 000440 017170 033760
00050: 000000 164372 000440 017000 031460 002745 000000 000040
00060: 006000 103472 000000 000452 000000 017000 113251 034001
00070: 033740 103476 000000 000000 000000 000000 000000 000000
00100: SAME: TO 000200-1

*T RECORD 2138 (%4132, #85A)
00000: 036000 060156 010322 004026 000000 000456 017000 111576
00010: 000106 000440 000000 017000 031460 033670 014040 005000
00020: 000000 031460 000000 000040 007000 031760 000000 164310
00030: 000440 017340 033760 000000 000000 000514 017140 033760
00040: 000106 000455 000000 017000 033760 000106 000453 017000
00050: 000000 033760 025264 000516 006000 031460 000000 033761
00060: 050040 005000 031760 164363 000000 000440 017300 031476
00070: 000000 000440 000000 017170 000000 000000 000000 000000
00100: SAME: TO 000200-1

*T RECORD 2139 (%4133, #85B)
00000: 036000 060156 061063 004104 000000 031475 000000 000440
00010: 017170 031474 000000 000000 000440 017170 006425 034001
00020: 000000 033756 031473 000000 000440 017170 000000 033760
00030: 164363 000440 017000 031460 000000 002745 000040 006000
00040: 031460 000000 000000 000040 007000 031460 026014 000040
00050: 000000 006000 031760 164424 000440 017340 000000 033760
00060: 000000 000507 017000 111567 000000 000001 000440 017000
00070: 031460 033772 000000 120040 000000 000000 000000 000000
00100: SAME: TO 000200-1

*T RECORD 2140 (%4134, #85C)
00000: 036000 060156 167161 004162 000000 005000 031760 176432
00010: 000440 017340 000000 031760 000000 000500 017000 031460
00020: 000000 033571 120040 006000 031760 176426 000000 000440
00030: 017340 031760 000000 000500 000000 017000 073773 034001
00040: 033774 031460 000000 034023 122040 005000 031760 164442
00050: 000000 000440 017340 021760 000000 000500 000000 017070
00060: 031460 034123 120040 005000 000000 031460 000000 000040
00070: 017140 031460 000000 000000 000000 000000 000000 000000
00100: SAME: TO 000200-1

*T RECORD 2141 (%4135, #85D)
00000: 036000 060156 010570 004240 000000 000040 017260 031760
```

```
00010: 134721 000440 000000 017340 033760 000000 000512 017140
00020: 000000 033760 000000 000513 017000 031760 000000 164424
00030: 000440 017340 033760 000000 000000 000507 017000 111567
00040: 000001 000440 000000 017000 031460 034026 120040 005000
00050: 000000 031760 164432 000440 017340 160405 000000 034001
00060: 034012 033760 000000 000500 000000 017140 033760 000000
00070: 000501 017000 000000 031760 000000 000000 000000 000000
00100: SAME: TO 000200-1

*T RECORD 2142 (%4136, #85E)
00000: 036000 060156 035560 004316 000000 164427 000440 017340
00010: 031760 000000 000000 000500 017000 031460 034021 020040
00020: 000000 005000 113160 000000 000452 017000 000000 113161
00030: 034026 000453 016000 033460 000000 000000 000452 017000
00040: 033461 034026 000000 000453 016000 031760 164444 000440
00050: 000000 017340 033760 000000 000512 017140 000000 033760
00060: 000000 000513 017000 031473 000000 000000 000440 017030
00070: 031760 164410 000000 000440 000000 000000 000000 000000
00100: SAME: TO 000200-1

*T RECORD 2143 (%4137, #85F)
00000: 036000 060156 010177 004374 000000 017360 005737 034001
00010: 034030 031760 000000 164417 000440 017360 031472 000000
00020: 000000 000440 017030 031760 164412 000440 000000 017360
00030: 031760 164421 000440 017360 000000 031460 034051 054040
00040: 005000 111567 000000 000001 000440 017000 031460 034051
00050: 000000 020040 005000 031460 003577 000040 000000 006000
00060: 031460 034043 050040 005000 000000 031460 033034 000040
00070: 006000 031460 000000 034051 000000 000000 000000 000000
00100: SAME: TO 000200-1

*T RECORD 2144 (%4140, #860)
00000: 036000 060156 151125 004452 000000 150040 005000 031760
00010: 164441 000440 000000 017340 031760 000000 000500 017000
00020: 000000 031460 034123 020040 005000 042111 000000 034001
00030: 034046 033760 177261 000440 000000 017000 041260 002745
00040: 000440 006070 000000 031460 034123 000040 016000 031760
00050: 000000 164441 000440 017340 031760 000000 000000 000500
00060: 017000 031460 034057 120040 000000 005000 101760 000000
00070: 000440 017070 000000 033760 000000 000000 000000 000000
00100: SAME: TO 000200-1

*T RECORD 2145 (%4141, #861)
00000: 036000 060156 177562 004530 000000 177270 000440 017000
00010: 031460 002745 000000 000040 006000 033760 164407 000440
00020: 000000 017000 031460 025200 000040 006000 000000 033760
00030: 164416 000440 017000 031460 000000 025314 000040 006000
00040: 031760 164321 000000 000440 017340 160136 034001 034064
00050: 000000 033760 000000 000500 017140 033760 000000 000000
00060: 000501 017000 031760 164315 000000 000440 017300 041560
00070: 177400 002440 000000 017074 000000 000000 000000 000000
00100: SAME: TO 000200-1

*T RECORD 2146 (%4142, #862)
00000: 036000 060156 027657 004606 000000 041560 000377 000440
00010: 017170 041561 000000 177400 002440 017174 041561 000377
00020: 000000 000440 017170 031760 164323 000440 000000 017340
00030: 031760 000000 000500 017000 000000 031460 034121 014040
```

```
00040: 005000 031760 000000 164440 000440 017340 033760 000000
00050: 000000 000510 017000 033760 000003 000444 000000 017000
00060: 001564 164456 000440 017340 000000 146417 034001 034102
00070: 041570 000000 000000 000500 000000 000000 000000 000000
00100: SAME: TO 000200-1
```

*T RECORD 2147 (%4143, #863)
```
00000: 036000 060156 126140 004664 000000 017000 031460 034117
00010: 120040 005000 000000 033760 077777 000440 017000 001564
00020: 000000 164434 000440 017340 033760 000000 000000 000501
00030: 017000 001564 164315 000440 000000 017340 033760 000000
00040: 000502 017000 000000 111567 000004 000440 017000 031460
00050: 000000 034115 120040 005000 031460 033545 000000 000040
00060: 006000 031460 034116 000040 000000 016000 031460 033517
00070: 000040 006000 000000 031462 000000 000000 000000 000000
00100: SAME: TO 000200-1
```

*T RECORD 2148 (%4144, #864)
```
00000: 036000 060156 054315 004742 000000 000000 000440 017070
00010: 013464 000000 000000 000444 017000 012350 034001 034120
00020: 000000 031460 034101 114040 005000 033760 000000 164315
00030: 000440 017000 031460 003540 000000 000040 006000 031460
00040: 000000 000040 000000 007000 031760 134721 000440 017340
00050: 000000 033760 000000 000501 017140 033760 000000 024251
00060: 000500 006000 031760 141733 000000 000440 017340 031760
00070: 000000 000500 000000 017000 000000 000000 000000 000000
00100: SAME: TO 000200-1
```

*T RECORD 2149 (%4145, #865)
```
00000: 036000 060156 006375 005020 000000 033460 000000 014446
00010: 007030 101760 000000 164444 000440 017360 033461 034135
00020: 000000 000445 006270 031460 000000 000040 000000 007000
00030: 113565 000002 000445 017000 000000 126315 034001 034136
00040: 113566 000002 000000 000446 017000 033760 000005 000441
00050: 000000 017000 031760 164372 000440 017300 000000 031466
00060: 000000 000440 017170 031461 000000 000000 000440 017170
00070: 031465 000000 000000 000440 000000 000000 000000 000000
00100: SAME: TO 000200-1
```

*T RECORD 2150 (%4146, #866)
```
00000: 036000 060156 062344 005076 000000 017170 031461 000000
00010: 000440 017170 000000 033760 164372 000440 017000 031460
00020: 000000 003050 000040 006000 103466 000000 000000 000446
00030: 017000 103465 000000 000445 000000 017000 033760 000003
00040: 000441 017000 000000 031760 164363 000440 017300 031466
00050: 000000 000000 000440 017170 103346 034001 000000 034154
00060: 031461 000000 000440 017170 000000 031465 000000 000440
00070: 017170 031461 000000 000000 000000 000000 000000 000000
00100: SAME: TO 000200-1
```

*T RECORD 2151 (%4147, #867)
```
00000: 036000 060156 072602 005154 000000 000440 017170 033760
00010: 164363 000440 000000 017000 031460 003050 000040 006000
00020: 000000 031460 000000 000040 007000 031460 000000 034210
00030: 000040 006000 031460 024360 000000 000040 006000 031460
00040: 034202 150040 000000 005000 031760 176426 000440 017300
00050: 000000 041260 000000 000440 017070 033760 000000 074402
00060: 000440 017000 001560 000033 000000 000440 017340 033760
```

```
00070: 000300 000440 000000 017000 000000 000000 000000 000000
00100: SAME: TO 000200-1


*T RECORD 2152 (%4150, #868)
00000: 036000 060156 115735 005232 000000 015733 034001 034172
00010: 061560 000000 000000 000500 017070 031760 101416 000440
00020: 000000 017340 033760 000000 000500 017000 000000 111560
00030: 000033 000440 017000 031460 000000 034207 120040 005000
00040: 031760 100034 000000 000440 017030 031760 101362 000440
00050: 000000 017360 031460 034207 000040 016000 000000 101760
00060: 141737 000440 017340 033760 000000 000000 000505 017240
00070: 033760 000000 000000 000506 000000 000000 000000 000000
00100: SAME: TO 000200-1


*T RECORD 2153 (%4151, #869)
00000: 036000 060156 021113 005310 000000 017000 101760 164444
00010: 000440 017360 000000 031465 034135 000440 006270 031460
00020: 000000 000000 000040 007000 041327 026001 000000 034210
00030: 101760 164372 000440 017340 000000 033760 000000 000500
00040: 017140 033760 000000 000000 000501 017140 033760 000000
00050: 000000 000502 017140 031760 164367 000440 000000 017360
00060: 031462 000000 000440 017270 000000 031461 000000 000440
00070: 017270 031460 000000 000000 000000 000000 000000 000000
00100: SAME: TO 000200-1


*T RECORD 2154 (%4152, #86A)
00000: 036000 060156 041142 005366 000000 000440 017270 033760
00010: 164363 000440 000000 017000 031460 002745 000040 006000
00020: 000000 031460 000000 000040 007000 144277 000000 034000
00030: 164324 100017 000000 000000 000000 000000 000001 000000
00040: 146307 100010 000000 000000 000000 000000 000000 164253
00050: 000000 100010 000000 000000 000000 000000 000000 164260
00060: 100007 000000 000000 000000 000000 000000 164272 100010
00070: 000000 000000 000000 000000 000000 000000 000000 000000
00100: SAME: TO 000200-1


*T RECORD 2155 (%4153, #86B)
00000: 036000 060156 111257 005444 000000 000000 164265 100013
00010: 000000 000000 000000 000000 000000 000000 000000 100013
00020: 000000 000000 000000 000000 000000 000377 000000 000377
00030: 100011 000000 000000 000000 000000 000000 000000 100017
00040: 000000 000001 000000 000000 000001 155302 023000 164414
00050: 000000 000000 164321 100007 000000 000001 000000 000000
00060: 000000 164323 000000 000000 000000 000000 000000 000000
00070: 000000 000200 000000 000100 000000 000000 000000 000000
00100: SAME: TO 000200-1


*T RECORD 2156 (%4154, #86C)
00000: 036000 060156 176443 005522 000000 000377 000377 000377
00010: 000377 000000 000000 000000 000017 000017 000000 000000
00020: 000000 033431 033445 033517 033517 033545 000000 033517
00030: 033570 033570 000001 000002 000000 000004 000010 175041
00040: 034001 034223 000000 113567 000005 000447 017000 001567
00050: 000000 164501 000440 017340 031760 164472 000000 000440
00060: 017360 001567 164503 000440 000000 017340 033760 000000
00070: 000517 017000 000000 001567 000000 000000 000000 000000
00100: SAME: TO 000200-1
```

451

```
*T RECORD 2157 (%4155, #86D)
00000: 036000 060156 175076 005600 000000 164505 000440 017340
00010: 031760 164467 000000 000440 017360 111567 000001 000440
00020: 000000 017000 031760 176422 116440 017340 000000 033760
00030: 000000 000515 017000 035475 000000 000000 000440 017003
00040: 123560 000043 000000 000453 017000 031460 034250 054040
00050: 000000 005000 101760 164470 000440 017340 000000 055051
00060: 034001 034241 033760 000000 000000 000501 017000 111561
00070: 000062 000440 000000 017000 000000 000000 000000 000000
00100: SAME: TO 000200-1

*T RECORD 2158 (%4156, #86E)
00000: 036000 060156 174014 005656 000000 031460 000000 020040
00010: 007000 021760 000000 000000 000500 017070 031460 000000
00020: 000000 114040 007000 031460 000000 000040 000000 017240
00030: 031460 000000 000040 017160 000000 031760 134721 000440
00040: 017340 123560 000000 000000 000501 017140 123560 000000
00050: 000000 000502 017000 031760 164473 000440 000000 017300
00060: 031462 000000 000440 017070 000000 031760 164336 000440
00070: 017300 001161 000000 000000 000000 000000 000000 000000
00100: SAME: TO 000200-1

*T RECORD 2159 (%4157, #86F)
00000: 036000 060156 064234 005734 000000 000457 017030 166714
00010: 034001 034257 000000 021760 000000 000500 017070 101760
00020: 000000 164324 000440 017300 031462 000000 000000 000440
00030: 017070 031475 000000 000440 000000 017170 031461 000000
00040: 000440 017170 000000 031475 000000 000440 017170 041260
00050: 000000 000000 000440 017170 031760 146307 000000 000440
00060: 017170 033760 164324 000440 000000 017000 031460 025200
00070: 000040 006000 000000 033473 000000 000000 000000 000000
00100: SAME: TO 000200-1

*T RECORD 2160 (%4160, #870)
00000: 036000 060156 146633 006012 000000 000000 000456 017000
00010: 003177 000000 000000 000456 017030 031760 164477 000440
00020: 000000 017360 037475 000000 000455 017002 000000 113734
00030: 034001 034275 033475 000000 000000 000440 017000 030477
00040: 003435 000440 000000 006000 031260 000000 000440 017030
00050: 000000 031760 164474 000440 017360 001660 000000 146307
00060: 000440 017030 031760 164475 000000 000440 017360 001576
00070: 176204 000440 000000 017340 000000 000000 000000 000000
00100: SAME: TO 000200-1

*T RECORD 2161 (%4161, #871)
00000: 036000 060156 173725 006070 000000 123573 000000 000514
00010: 017000 003177 000000 000000 000454 017000 001576 176312
00020: 000000 000440 017340 037477 000000 000440 000000 017002
00030: 123560 000000 000511 017000 000000 031760 164467 000440
00040: 017340 033760 000000 000000 000516 017000 073341 034001
00050: 000000 034313 031760 164475 000440 017340 000000 031760
00060: 164476 000440 017300 037474 000000 000000 000440 017002
00070: 001560 000000 000000 000500 000000 000000 000000 000000
00100: SAME: TO 000200-1

*T RECORD 2162 (%4162, #872)
00000: 036000 060156 044064 006146 000000 017070 031760 164473
00010: 000440 017340 000000 003574 000000 000501 017030 101760
```

EP 0 455 351 A2

```
00020: 000000 164333 000440 017360 031471 000000 000000 000440
00030: 017170 031460 000000 000040 000000 017140 103760 000000
00040: 000502 017070 000000 031471 000000 000440 017000 031460
00050: 000000 034527 040040 005000 031760 164425 000000 000440
00060: 017340 031760 000000 000500 000000 017000 005107 034001
00070: 034331 031460 000000 034334 000000 000000 000000 000000
00100: SAME: TO 000200-1


*T RECORD 2163 (%4163, #873)
00000: 036000 060156 024765 006224 000000 020040 005000 033760
00010: 164333 000440 000000 017000 031460 025314 000040 006000
00020: 000000 031460 034342 154040 005000 033760 000000 164347
00030: 000440 017300 031461 000000 000000 000440 017170 031471
00040: 000000 000440 000000 017170 031462 000000 000440 017170
00050: 000000 041260 025314 000440 006170 033760 000000 164401
00060: 000440 017300 031461 000000 000000 000440 017170 031471
00070: 000000 000440 000000 017170 000000 000000 000000 000000
00100: SAME: TO 000200-1


*T RECORD 2164 (%4164, #874)
00000: 036000 060156 047751 006302 000000 031462 000000 000440
00010: 017170 041260 000000 000000 000440 017170 013352 034001
00020: 000000 034347 031760 164462 000440 017170 000000 031460
00030: 025314 000040 006000 043260 000000 000000 000452 017000
00040: 031760 164500 000000 000440 017300 031471 000000 000440
00050: 000000 017070 031760 164440 000440 017340 000000 033760
00060: 000000 000511 017000 033760 000000 000003 000443 017000
00070: 031760 164425 000000 000440 000000 000000 000000 000000
00100: SAME: TO 000200-1


*T RECORD 2165 (%4165, #875)
00000: 036000 060156 107506 006360 000000 017340 031760 000000
00010: 000500 017000 000000 031460 034365 020040 005000 031760
00020: 000000 164253 000440 017300 033472 034620 000000 000440
00030: 006000 031460 034371 150040 000000 005000 163677 034001
00040: 034365 031460 000000 034377 154040 005000 031760 164272
00050: 000000 000440 017300 033472 034620 000440 000000 006000
00060: 031460 034377 150040 005000 000000 031760 164476 000440
00070: 017340 031760 000000 000000 000000 000000 000000 000000
00100: SAME: TO 000200-1


*T RECORD 2166 (%4166, #876)
00000: 036000 060156 003432 006436 000000 000500 017340 033760
00010: 000000 000500 000000 017140 037472 000000 000441 017002
00020: 000000 101561 164037 000440 017360 031460 000000 034476
00030: 000440 016270 031460 000000 000000 000020 015000 031760
00040: 164272 000440 000000 017300 033472 034625 000440 006000
00050: 000000 031760 164462 000440 017300 024723 000000 034001
00060: 034403 033472 034625 000440 000000 006000 001563 164456
00070: 000440 017340 000000 041571 000000 000000 000000 000000
00100: SAME: TO 000200-1


*T RECORD 2167 (%4167, #877)
00000: 036000 060156 127340 006514 000000 000000 000500 017000
00010: 031460 034412 000000 020040 005000 031760 164476 000440
00020: 000000 017340 031760 034544 000500 006300 000000 033760
00030: 034456 000502 016000 123477 000000 000000 000450 017000
00040: 031760 164476 000000 000440 017340 033760 000000 000506
```

453

```
00050: 000000 017000 031760 164474 000440 017340 000000 113566
00060: 000000 000506 017000 037477 000000 000000 000440 017002
00070: 113160 000000 000000 000446 000000 000000 000000 000000
00100: SAME: TO 000200-1


*T RECORD 2168 (%4170, #878)
00000: 036000 060156 071026 006572 000000 017000 063062 034001
00010: 034421 043260 000000 000000 000442 017000 043260 000000
00020: 000000 000444 017000 123477 000000 000447 000000 017000
00030: 033466 000000 000445 017000 000000 031465 034544 000440
00040: 006300 033760 000000 000000 000500 017000 031760 164472
00050: 000000 000440 017340 001564 000000 000500 000000 017340
00060: 030760 003435 000500 006000 000000 103464 000000 000444
00070: 017000 003565 000000 000002 000000 000000 000000 000000
00100: SAME: TO 000200-1


*T RECORD 2169 (%4171, #879)
00000: 036000 060156 000327 006650 000000 000445 017000 103467
00010: 000000 000447 000000 017000 121167 000000 000457 017000
00020: 000000 003062 034425 040442 005000 054615 000000 034001
00030: 034437 103470 000000 000450 000000 017000 121170 000000
00040: 000457 017000 000000 003175 034423 040446 005000 031462
00050: 000000 000000 003440 017036 031460 034445 000000 140040
00060: 005000 043260 034456 000442 000000 016000 030760 000000
00070: 000500 017000 000000 043260 000000 000000 000000 000000
00100: SAME: TO 000200-1


*T RECORD 2170 (%4172, #87A)
00000: 036000 060156 002356 006726 000000 000000 000440 017000
00010: 033476 003325 000000 000441 006000 003561 000002 000441
00020: 000000 017000 041561 177774 000440 017036 000000 033760
00030: 000000 000502 017000 111562 000000 000400 000440 017000
00040: 031460 034456 000000 014040 005000 076166 034001 034455
00050: 000000 033760 000377 000442 017000 037472 000000 000000
00060: 000440 017002 001560 164037 000000 000440 017300 035463
00070: 000000 000440 000000 017002 000000 000000 000000 000000
00100: SAME: TO 000200-1


*T RECORD 2171 (%4173, #87B)
00000: 036000 060156 043214 007004 000000 001560 000000 032520
00010: 017340 033760 000000 000377 000441 017000 031460 034467
00020: 000000 054040 005000 041561 000000 002500 000000 017034
00030: 031562 000000 002500 017074 000000 031460 034472 000040
00040: 016000 033760 000000 177400 000441 017000 041561 000000
00050: 000000 000500 017030 031562 000000 000500 000000 017070
00060: 013463 000000 000443 017000 000000 055764 034001 034473
00070: 031460 034404 000000 114040 000000 000000 000000 000000
00100: SAME: TO 000200-1


*T RECORD 2172 (%4174, #87C)
00000: 036000 060156 116541 007062 000000 005000 031460 000000
00010: 000040 011000 000000 031760 000000 003400 017010 031760
00020: 000000 164500 000440 017340 033760 000000 000000 000511
00030: 017000 031760 164476 000440 000000 017340 033760 000002
00040: 000440 017000 000000 001560 000000 000500 017070 103472
00050: 000000 000000 000452 017000 121172 000000 000000 000451
00060: 017000 031460 034352 014040 000000 005000 031760 164473
00070: 000440 017340 000000 003574 000000 000000 000000 000000
```

```
00100: SAME: TO 000200-1

*T RECORD 2173 (%4175, #87D)
00000: 036000 060156 064017 007140 000000 000000 000501 017000
00010: 031760 164336 000000 000440 017340 144137 034001 034511
00020: 000000 033760 000000 000502 017000 033760 000000 164531
00030: 000440 017300 031461 000000 000000 000440 017170 031471
00040: 000000 000440 000000 017170 031462 025200 000440 006170
00050: 000000 031760 164405 000440 017300 031760 000000 100000
00060: 000440 017070 033760 164401 000000 000440 017000 031460
00070: 025314 000040 000000 006000 000000 000000 000000 000000
00100: SAME: TO 000200-1

*T RECORD 2174 (%4176, #87E)
00000: 036000 060156 030540 007216 000000 031460 034527 154040
00010: 005000 031760 000000 164353 000440 017300 031760 100000
00020: 000000 000440 017070 033760 164347 000440 000000 017000
00030: 031460 025314 000040 006000 000000 122617 034001 034527
00040: 031760 164475 000000 000440 017340 001575 000000 000500
00050: 000000 017070 031760 164477 000440 017340 000000 103760
00060: 000000 000516 017070 033476 000000 000000 000440 017000
00070: 003173 000000 000000 000440 000000 000000 000000 000000
00100: SAME: TO 000200-1

*T RECORD 2175 (%4177, #87F)
00000: 036000 060156 045456 007274 000000 017000 003177 000000
00010: 000440 017000 000000 035475 000000 000441 017003 031461
00020: 000000 000000 000440 017000 013440 000000 000000 144440
00030: 017000 111560 000106 000440 000000 017000 031460 034303
00040: 014040 005000 000000 031460 000000 000040 007000 035463
00050: 000000 000000 000440 017002 123466 012001 000000 034545
00060: 001560 000000 032520 017340 000000 033760 000377 000441
00070: 017000 031460 000000 034551 000000 000000 000000 000000
00100: SAME: TO 000200-1

*T RECORD 2176 (%4200, #880)
00000: 035000 060155 042311 007352 000000 054040 005000 031760
00010: 000000 002500 000000 017034 041561 000000 000500 007030
00020: 000000 060743 017400 164501 164507 164520 000000 000001
00030: 000001 000011 000011 000001 000000 000001 000001 000001
00040: 000001 000001 000000 000001 000001 000001 177777 177777
00050: 000000 177777 177777 000021 177777 177777 000000 177777
00060: 177777 100017 000000 000000 000000 000000 000001 100000
00070: 164037 122055 000000 000000 000000 000000 000000 000000
00100: SAME: TO 000200-1

*T RECORD 2177 (%4201, #881)
00000: 002000 120000 120000 000000 000000 000000 000000 000000
00010: SAME: TO 000200-1

*T RECORD 2178 (%4202, #882)
00000: 025000 020000 123577 077101 051114 041040 000355 000000
00010: SAME: TO 000020-1
00020: 000000 020101 044522 041122 020114 044502 027040 044517
00030: 047111 020074 034065 030063 031066 027060 034462 032476
00040: 020040 020040 020040 020040 020040 020040 020040 020040
00050: 020040 020040 000000 000000 000000 000000 000000 000000
00060: SAME: TO 000200-1
```

```
*T RECORD 2179 (%4203, #883)
00000: 003400 040001 051216 077101 051114 041000 000000 000000
00010: SAME: TO 000200-1

*T RECORD 2180 (%4204, #884)
00000: 036000 060156 167716 000000 000000 000354 034001 034552
00010: 033760 040000 000000 000440 017000 031461 000000 000440
00020: 000000 017000 031460 034556 115040 005000 000000 123460
00030: 000000 000440 017000 000060 000000 000000 000440 017000
00040: 003740 000000 000000 024440 017000 101461 000000 000440
00050: 000000 017000 031460 034563 020040 005000 000000 003160
00060: 000000 000441 017000 036461 000000 000000 000441 017003
00070: 031460 000000 000000 000040 000000 000000 000000 000000
00100: SAME: TO 000200-1

*T RECORD 2181 (%4205, #885)
00000: 036000 060156 165177 000056 000000 007000 031460 034567
00010: 114040 005000 000000 043260 000000 000442 007000 111562
00020: 000000 000400 000440 017000 076236 034001 000000 034570
00030: 031460 000000 014040 007000 000000 033760 000377 000442
00040: 017000 031460 000000 000000 000040 007000 031460 000000
00050: 000000 000440 017000 031460 034577 114040 000000 005000
00060: 003160 000000 000441 017000 000000 043260 000000 000440
00070: 007000 123160 000000 000000 000000 000000 000000 000000
00100: SAME: TO 000200-1

*T RECORD 2182 (%4206, #886)
00000: 036000 060156 005273 000134 000000 000442 017000 003161
00010: 000000 000442 000000 017000 031460 000000 040040 007000
00020: 000000 113162 000000 000441 007000 031460 000000 000000
00030: 005040 017000 121172 000000 000000 000441 017000 031460
00040: 034617 014040 000000 005000 143173 034001 034606 121173
00050: 000000 000000 000441 017000 031460 034617 000000 014040
00060: 005000 111572 000600 000440 000000 017030 001560 000000
00070: 000500 017000 000000 031460 000000 000000 000000 000000
00100: SAME: TO 000200-1

*T RECORD 2183 (%4207, #887)
00000: 036000 060156 014560 000212 000000 034617 140040 005000
00010: 111573 001000 000000 000440 017030 001560 000000 000500
00020: 000000 017000 031460 034617 140040 005000 000000 031460
00030: 000000 000040 007000 031460 000000 000000 001040 007000
00040: 031460 034633 000000 000040 006000 031760 100000 000440
00050: 000000 017034 041560 000000 000500 017030 000000 031460
00060: 000000 121040 017000 146323 000000 034001 034624 031460
00070: 000000 000040 000000 007000 000000 000000 000000 000000
00100: SAME: TO 000200-1

*T RECORD 2184 (%4210, #888)
00000: 036000 060156 066725 000270 000000 031460 034633 000040
00010: 006000 031760 000000 100000 000440 017034 031560 000000
00020: 000000 000500 007070 031460 034633 000040 000000 006000
00030: 031760 077777 000440 017034 000000 041560 000000 000500
00040: 007070 030760 000000 007777 000440 017000 041660 000000
00050: 000000 003420 017010 040260 000000 000440 000000 017000
00060: 034460 000002 000640 017001 000000 031660 000000 003420
00070: 017010 001560 000000 000000 000000 000000 000000 000000
```

```
00100: SAME: TO 000200-1

*T RECORD 2185 (%4211, #889)
00000: 006400 060107 133600 000346 000000 000520 017340 033760
00010: 000000 000500 000000 007000 167363 000000 000000 000000
00020: SAME: TO 000200-1

*T RECORD 2186 (%4212, #88A)
00000: 002000 120000 120000 000000 000000 000000 000000 000000
00010: SAME: TO 000200-1

*T RECORD 2187 (%4213, #88B)
00000: 025000 020000 000216 077101 051115 041440 001152 000000
00010: SAME: TO 000020-1
00020: 000000 020101 044522 041122 020115 040524 027103 051105
00030: 040524 027111 047516 044474 034067 030061 030067 027060
00040: 034064 032076 020040 020040 020040 020040 020040 020040
00050: 020040 020040 000000 000000 000000 000000 000000 000000
00060: SAME: TO 000200-1

*T RECORD 2188 (%4214, #88C)
00000: 003400 040001 051617 077101 051115 041400 000000 000000
00010: SAME: TO 000200-1

*T RECORD 2189 (%4215, #88D)
00000: 036000 060156 102142 000000 000000 001151 034001 034642
00010: 031760 176420 000000 000440 017340 037760 000000 000511
00020: 000000 017142 033760 000000 000510 017140 000000 031460
00030: 034647 020040 005000 103470 000000 000000 000450 017000
00040: 035760 000000 000000 000507 017003 035451 000000 032451
00050: 000000 017002 013427 000000 000447 017000 000000 033760
00060: 171425 000454 017000 013434 000000 000000 000455 017000
00070: 033474 034656 000000 054456 000000 000000 000000 000000
00100: SAME: TO 000200-1

*T RECORD 2190 (%4216, #88E)
00000: 036000 060156 136351 000056 000000 005000 113576 000106
00010: 000456 017000 000000 013436 000000 000457 017000 043260
00020: 000000 000000 000452 017000 043243 034001 000000 034660
00030: 043260 000000 000453 017000 000000 121172 000000 000447
00040: 017000 041260 000000 034723 140440 005030 121173 000000
00050: 000000 000447 017000 031460 034723 140040 000000 005000
00060: 031473 000000 001440 017037 000000 033760 000000 000500
00070: 017000 031472 000000 000000 000000 000000 000000 000000
00100: SAME: TO 000200-1

*T RECORD 2191 (%4217, #88F)
00000: 036000 060156 033373 000134 000000 001440 017037 033760
00010: 000000 000501 000000 017000 031460 034777 000040 006000
00020: 000000 003561 000600 000442 017000 041562 000000 177000
00030: 002440 017035 033760 077777 000000 000440 017000 031461
00040: 000000 000440 000000 017000 024161 034001 034676 033760
00050: 000000 034716 020502 005000 121167 000000 000000 000442
00060: 017000 041260 034723 014440 000000 005030 041571 000003
00070: 000440 017000 000000 031460 000000 000000 000000 000000
00100: SAME: TO 000200-1

*T RECORD 2192 (%4220, #890)
```

457

```
00000:  036000  060156  110047  000212  000000  034716  020040  005000
00010:  031467  000000  000000  001440  017037  125561  000000  000500
00020:  000000  017003  033760  000000  015501  017000  000000  031760
00030:  000012  000440  017030  031460  000000  034723  050040  005000
00040:  040260  003325  000000  000440  006000  033461  000000  005440
00050:  000000  017000  031471  000000  000440  017000  000000  031460
00060:  034716  044040  005000  121351  000000  034001  034714  030461
00070:  003435  000440  000000  006000  000000  000000  000000 000000
00100:  SAME: TO 000200-1

*T RECORD 2193 (%4221, #891)
00000:  036000  060156  125152  000270  000000  036461  000000  000440
00010:  017003  030470  000000  003435  000440  006000  034461  000006
00020:  000000  000641  017003  111660  000012  000440  000000  017000
00030:  031260  034723  114440  005030  000000  031760  000012  000440
00040:  017030  033760  000000  000000  000501  017000  031471  000000
00050:  000000  000440  017000  041571  000020  016440  000000  017000
00060:  041571  000040  121440  017000  000000  031473  034732  020440
00070:  005000  034732  000000  034736  000000  000000  000000  000000
00100:  SAME: TO 000200-1

*T RECORD 2194 (%4222, #892)
00000:  036000  060156  164736  000346  000000  120042  001000  031460
00010:  034740  150040  000000  005000  130720  034001  034732  001174
00020:  000000  000000  000453  017360  001176  000000  000000  000453
00030:  017360  121175  000000  000453  000000  017360  121177  034746
00040:  000453  016360  000000  031460  034740  150040  005000  041260
00050:  000000  000000  000440  017030  001174  000000  000000  000453
00060:  017360  001176  000000  000453  000000  017360  041260  034744
00070:  150440  005030  000000  031461  000000  000000  000000  000000
00100:  SAME: TO 000200-1

*T RECORD 2195 (%4223, #893)
00000:  036000  060156  167763  000424  000000  000000  000440  017030
00010:  121175  000000  000000  000453  017360  121177  000000  000453
00020:  000000  017360  031461  000000  000440  017030  000000  031460
00030:  034753  020040  005000  041565  000000  034001  034750  103473
00040:  000000  000453  000000  017000  011553  000043  154440  017000
00050:  000000  031460  034661  014040  005000  031473  000000  000000
00060:  003440  017037  031460  034756  000000  020040  005000  021740
00070:  000000  154500  000000  017030  000000  000000  000000  000000
00100:  SAME: TO 000200-1

*T RECORD 2196 (%4224, #894)
00000:  036000  060156  054276  000502  000000  001572  176355  000440
00010:  017360  021532  000000  176355  000440  017360  121573  000043
00020:  000000  000440  017030  001720  000000  000500  000000  017030
00030:  001572  176247  000440  017360  000000  021532  176247  000440
00040:  017360  113577  000000  000106  000457  017000  113576  000106
00050:  000000  000456  017000  114741  034001  034766  000000  003575
00060:  000106  000455  017000  003574  000000  000106  000454  017000
00070:  103472  000000  000000  000452  000000  000000  000000  000000
00100:  SAME: TO 000200-1

*T RECORD 2197 (%4225, #895)
00000:  036000  060156  151546  000560  000000  017000  111572  000043
00010:  000440  017000  000000  031460  034660  014040  005000  031460
00020:  000000  034776  154040  005000  041260  000000  000000  000440
```

```
00030: 017030 031760 176312 000440 000000 017360 031460 000000
00040: 000040 007000 000000 031460 000000 000440 017000 031460
00050: 000000 035002 114040 005000 123460 000000 000000 000440
00060: 017000 033461 000000 000443 000000 017000 031460 035005
00070: 114040 005000 000000 040340 000000 000000 000000 000000
00100: SAME: TO 000200-1


*T RECORD 2198 (%4226, #896)
00000: 036000 060156 054766 000636 000000 034001 035004 123461
00010: 000000 000443 000000 017000 031460 035037 020040 005000
00020: 000000 033460 000000 000445 017000 031460 000000 035040
00030: 020040 005000 003163 000000 000000 000445 017000 031460
00040: 035040 010040 000000 005000 030460 003435 000440 006000
00050: 000000 033463 000000 000440 017000 033461 000000 000000
00060: 000443 017000 033260 000000 000000 000444 017000 030460
00070: 003435 000440 000000 006000 000000 000000 000000 000000
00100: SAME: TO 000200-1


*T RECORD 2199 (%4227, #897)
00000: 036000 060156 134445 000714 000000 003064 000000 000444
00010: 017000 003141 000000 000000 024443 017000 033463 000000
00020: 000000 000440 017000 104430 034001 035022 000000 030464
00030: 000000 000440 017000 033465 000000 003325 000441 006000
00040: 037460 000000 000000 000440 017002 031460 000000 000440
00050: 000000 017000 031460 035031 015040 005000 000000 121160
00060: 000000 000445 017000 031460 000000 000000 115040 017000
00070: 003401 000000 000000 000441 000000 000000 000000 000000
00100: SAME: TO 000200-1


*T RECORD 2200 (%4230, #898)
00000: 036000 060156 023206 000772 000000 017000 105165 000000
00010: 000441 017003 000000 043561 077777 000441 017000 121161
00020: 000000 000000 000445 017000 031460 035040 000000 114040
00030: 005000 033461 035021 000445 000000 016000 033460 000000
00040: 000441 017000 000000 030213 002001 035040 031460 000000
00050: 000000 000040 007000 075560 034000 176312 000000 000000
00060: SAME: TO 000200-1


*T RECORD 2201 (%4231, #899)
00000: 036000 060156 057540 001050 000000 000000 000000 000000
00010: SAME: TO 000070-1
00070: 000000 000000 000000 176312 000000 000000 000000 000000
00100: SAME: TO 000200-1


*T RECORD 2202 (%4232, #89A)
00000: 016000 060124 067704 001126 000000 010400 176402 000000
00010: SAME: TO 000030-1
00030: 000000 000377 000014 177015 000000 000000 000000 000000
00040: SAME: TO 000200-1


*T RECORD 2203 (%4233, #89B)
00000: 002000 120000 120000 000000 000000 000000 000000 000000
00010: SAME: TO 000200-1


*T RECORD 2204 (%4234, #89C)
00000: 025000 020000 002366 077101 051113 050040 011045 000000
00010: SAME: TO 000020-1
00020: 000000 020101 044522 041122 020113 042531 050101 042040
```

459

```
00030: 020040 044517 047111 020074 034071 030065 031066 027061
00040: 031064 034076 020040 020040 020040 020040 020040 020040
00050: 020040 020040 000000 000000 000000 000000 000000 000000
00060: SAME: TO 000200-1


*T RECORD 2205 (%4235, #89D)
00000: 003400 040001 060215 077101 051113 050000 000000 000000
00010: SAME: TO 000200-1


*T RECORD 2206 (%4236, #89E)
00000: 036000 060156 134107 000000 000000 011044 034001 035041
00010: 031760 164424 000000 000440 017340 033760 000000 000503
00020: 000000 017000 031760 164426 000440 017340 000000 103760
00030: 000000 000440 017000 061560 000000 000000 000500 017070
00040: 103760 035054 000000 020500 005000 011463 000000 000500
00050: 000000 015000 031460 033744 020040 006000 000000 033760
00060: 000010 000443 017000 031460 000000 000000 000040 011000
00070: 103760 000000 000000 000400 000000 000000 000000 000000
00100: SAME: TO 000200-1


*T RECORD 2207 (%4237, #89F)
00000: 036000 060156 126306 000056 000000 017000 037460 000000
00010: 000640 017002 000000 031760 101416 000440 017340 033760
00020: 000000 000000 000501 017000 134265 034001 000000 035057
00030: 001561 074476 000440 017340 000000 033760 177763 000442
00040: 017000 041562 000000 000000 000500 017030 031560 000000
00050: 000000 000500 017070 031760 101362 000440 000000 017300
00060: 001561 100001 000440 017070 000000 101760 074006 000440
00070: 017300 031463 000000 002111 000000 000000 000000 000000
00100: SAME: TO 000200-1


*T RECORD 2208 (%4240, #8A0)
00000: 036000 060156 162473 000134 000000 000440 006070 111563
00010: 000001 000440 000000 017000 031460 033626 020040 006000
00020: 000000 031460 000000 000040 007000 031760 000000 101362
00030: 000440 017300 101760 000050 000000 000440 017070 031460
00040: 000000 000040 000000 007000 002027 034001 035075 041260
00050: 000000 000000 000440 017030 031760 146224 000000 000440
00060: 017360 033760 051475 000440 000000 017000 031760 176527
00070: 005440 017030 000000 031460 000000 000000 000000 000000
00100: SAME: TO 000200-1


*T RECORD 2209 (%4241, #8A1)
00000: 036000 060156 035365 000212 000000 032632 000040 006000
00010: 031460 000000 000000 000040 007000 031460 035116 054040
00020: 000000 005000 031760 176430 000440 017340 000000 033760
00030: 035133 000500 006000 033760 000000 074006 000457 017000
00040: 031461 000000 000000 000440 017030 001577 000003 000440
00050: 000000 017360 031760 176421 000440 017360 000000 031460
00060: 002111 000040 006000 170672 000000 034001 035113 031460
00070: 034642 000040 000000 006000 000000 000000 000000 000000
00100: SAME: TO 000200-1


*T RECORD 2210 (%4242, #8A2)
00000: 036000 060156 115455 000270 000000 033760 177033 000440
00010: 017000 031460 000000 014073 000040 006000 031460 000000
00020: 000000 000040 007000 031760 101415 000440 000000 017340
00030: 023760 000000 000501 017000 000000 001561 177477 000440
```

```
00040: 017340 033760 000000 000000 000501 017000 031460 035131
00050: 000000 014040 005000 031760 176420 000440 000000 017360
00060: 101760 074006 000440 017300 000000 031460 002111 000040
00070: 006160 033461 000000 036051 000000 000000 000000 000000
00100: SAME: TO 000200-1


*T RECORD 2211 (%4243, #8A3)
00000: 036000 060156 121537 000346 000000 000440 006000 031460
00010: 034642 000040 000000 006000 071526 034001 035131 031460
00020: 000000 001516 000040 006000 031460 000000 000000 000040
00030: 007000 030760 000377 000440 000000 017000 031460 003435
00040: 000040 006000 000000 033461 000000 000440 017000 033760
00050: 000000 000144 000441 017000 031460 003325 000000 000040
00060: 006000 031460 000000 000040 000000 007000 030760 000144
00070: 000440 017000 000000 031460 000000 000000 000000 000000
00100: SAME: TO 000200-1


*T RECORD 2212 (%4244, #8A4)
00000: 036000 060156 002104 000424 000000 003435 000040 006000
00010: 033461 000000 000000 000440 017000 033760 000377 000441
00020: 000000 017000 031460 003325 000040 006000 000000 031460
00030: 000000 000040 007000 054665 000000 034001 035147 041260
00040: 000000 000440 000000 017030 031760 146224 000440 017360
00050: 000000 033760 000005 005440 017000 031760 000000 164424
00060: 000440 017340 121560 000000 000000 000500 017000 033760
00070: 052075 000040 000000 017000 000000 000000 000000 000000
00100: SAME: TO 000200-1


*T RECORD 2213 (%4245, #8A5)
00000: 036000 060156 143010 000502 000000 031760 176543 000040
00010: 017030 031460 000000 035160 014040 005000 031760 176547
00020: 000000 000440 017030 031460 032632 000040 000000 006000
00030: 031460 000000 000040 007000 000000 031460 035203 054040
00040: 005000 031460 000000 034642 000040 006000 031760 176422
00050: 000000 000440 017340 043724 034001 035165 000000 033760
00060: 074006 000440 017000 001560 000000 000004 000440 017360
00070: 031460 002111 000000 000040 000000 000000 000000 000000
00100: SAME: TO 000200-1


*T RECORD 2214 (%4246, #8A6)
00000: 036000 060156 025640 000560 000000 006000 031760 164430
00010: 000440 017300 000000 101760 000000 000440 017070 033760
00020: 000000 177047 000440 017000 031460 014073 000000 000040
00030: 006000 031760 164424 000440 000000 017340 033760 000000
00040: 000500 017000 000000 111560 000001 000440 017000 031460
00050: 000000 035203 120040 005000 031760 176432 000000 000440
00060: 017340 031760 000000 000500 000000 017000 031460 033571
00070: 120040 006000 000000 013465 000000 000000 000000 000000
00100: SAME: TO 000200-1


*T RECORD 2215 (%4247, #8A7)
00000: 036000 060156 172317 000636 000000 034001 035203 031460
00010: 000000 000040 000000 007000 031760 135023 000440 017340
00020: 000000 031760 000000 000500 017000 031460 000000 000000
00030: 020040 007000 031460 020747 000000 000040 006000 033760
00040: 164434 000440 000000 017000 001560 000003 000440 017300
00050: 000000 033464 000000 000445 017070 033463 000000 000000
00060: 000444 017270 033462 000000 000000 000443 017270 031461
```

461

```
00070: 000000 000440 000000 017270 000000 000000 000000 000000
00100: SAME: TO 000200-1


*T RECORD 2216 (%4250, #8A8)
00000: 036000 060156 030136 000714 000000 033760 074006 000440
00010: 017000 001560 000000 000005 000440 017360 031463 000000
00020: 000000 000440 017170 120050 034001 035221 000000 031464
00030: 000000 000440 017170 031465 000000 002111 000440 006170
00040: 033760 177343 000000 000440 017000 031460 020646 000040
00050: 000000 006000 033760 176702 000440 017000 000000 031460
00060: 014073 000040 006000 033760 000000 164434 000440 017000
00070: 031460 003540 000000 000040 000000 000000 000000 000000
00100: SAME: TO 000200-1


*T RECORD 2217 (%4251, #8A9)
00000: 036000 060156 143133 000772 000000 006000 031760 164431
00010: 000440 017340 000000 031760 000000 000500 017000 031460
00020: 000000 021412 120040 006000 031460 000000 000000 000040
00030: 007000 031760 135023 000440 000000 017340 031760 000000
00040: 000500 017000 000000 170653 034001 035237 031460 000000
00050: 000000 020040 007000 033760 177105 000440 000000 017000
00060: 033760 000025 000441 017000 000000 031460 035326 000040
00070: 006000 033760 000000 177261 000000 000000 000000 000000
00100: SAME: TO 000200-1


*T RECORD 2218 (%4252, #8AA)
00000: 036000 060156 002377 001050 000000 000440 017000 031760
00010: 000000 000500 000000 017000 031460 035251 020040 005000
00020: 000000 033760 164434 000440 017000 031460 000000 003540
00030: 000040 006000 033760 177270 000000 000440 017000 031460
00040: 002745 000040 000000 006000 031460 000000 000040 007000
00050: 000000 031760 135023 000440 017340 031760 000000 000000
00060: 000500 017000 143726 034001 000000 035255 031460 000000
00070: 020040 007000 000000 033760 000000 000000 000000 000000
00100: SAME: TO 000200-1


*T RECORD 2219 (%4253, #8AB)
00000: 036000 060156 020545 001126 000000 177205 000440 017000
00010: 033760 000027 000000 000441 017000 031460 035326 000040
00020: 000000 006000 031460 000000 000040 007000 000000 031760
00030: 135023 000440 017340 031760 000000 000000 000500 017000
00040: 031460 000000 000000 020040 007000 033760 177205 000440
00050: 000000 017000 031760 164424 000440 017340 000000 033760
00060: 000000 000507 017000 031460 000000 000000 000100 015000
00070: 111567 000004 000000 000440 000000 000000 000000 000000
00100: SAME: TO 000200-1


*T RECORD 2220 (%4254, #8AC)
00000: 036000 060156 117274 001204 000000 017000 031460 035274
00010: 120040 005000 000000 144232 034001 035273 033760 177141
00020: 000000 000440 017000 001567 177463 000440 000000 017340
00030: 033760 035326 000501 006000 000000 031460 000000 000040
00040: 011000 031760 000000 000000 000500 017000 033760 035304
00050: 000000 020407 005000 031760 033762 000440 000000 017030
00060: 033760 177270 000440 017000 000000 031460 035323 000040
00070: 016000 031760 000000 176426 000000 000000 000000 000000
00100: SAME: TO 000200-1
```

```
*T RECORD 2221 (%4255, #8AD)
00000: 036000 060156 064006 001262 000000 000440 017340 031760
00010: 000000 000500 000000 017000 031460 035316 020040 005000
00020: 000000 041260 034210 000440 006070 033760 000000 000033
00030: 000440 017000 170054 034001 000000 035311 001560 074402
00040: 000440 017340 000000 033760 000100 000440 017000 033760
00050: 000000 177477 000441 017000 041561 000000 000000 000500
00060: 017030 031560 000000 000500 000000 017070 031760 026014
00070: 000440 017030 000000 033760 000000 000000 000000 000000
00100: SAME: TO 000200-1

*T RECORD 2222 (%4256, #8AE)
00000: 036000 060156 035746 001340 000000 177261 000440 017000
00010: 111567 000001 000000 000440 017000 031460 035323 120040
00020: 000000 005000 031760 033571 000440 017030 000000 031760
00030: 135022 000440 017360 031460 000000 002745 000040 006000
00040: 031460 000000 000000 000040 007000 031760 101362 000440
00050: 000000 017300 150066 034001 035327 101561 000000 100000
00060: 000440 017070 031760 164431 000000 000440 017340 033760
00070: 000000 000502 000000 017000 000000 000000 000000 000000
00100: SAME: TO 000200-1

*T RECORD 2223 (%4257, #8AF)
00000: 036000 060156 177170 001416 000000 001561 074476 000440
00010: 017340 033760 000000 000077 000443 017000 031462 000000
00020: 000000 000440 017000 041563 035343 020500 000000 005030
00030: 033760 000100 000443 017000 000000 031563 021331 000500
00040: 006070 033760 000000 177251 000440 017000 031460 021362
00050: 000000 000040 006000 041260 035350 000440 000000 016030
00060: 033760 000200 000443 017000 000000 031563 021057 000500
00070: 006070 125153 000000 034001 000000 000000 000000 000000
00100: SAME: TO 000200-1

*T RECORD 2224 (%4260, #8B0)
00000: 036000 060156 175631 001474 000000 035345 033760 177251
00010: 000440 017000 000000 031460 021210 000040 006000 101760
00020: 000000 000000 000440 017030 031760 164431 000000 000440
00030: 017360 031460 000000 000040 000000 007000 033760 177251
00040: 000440 017000 000000 031460 022124 000040 006000 101260
00050: 000000 000000 000440 017000 031460 000000 000000 020040
00060: 007000 031760 164424 000440 000000 017340 033760 000000
00070: 000507 017000 000000 031460 000000 000000 000000 000000
00100: SAME: TO 000200-1

*T RECORD 2225 (%4261, #8B1)
00000: 036000 060156 062255 001552 000000 035367 120040 005000
00010: 033760 177340 000000 000440 017000 031460 020646 000040
00020: 000000 006000 031754 034001 035363 033760 000000 164434
00030: 000440 017000 031460 003540 000000 000040 006000 033760
00040: 176702 000440 000000 017000 031460 035453 000040 016000
00050: 000000 031760 176443 000440 017340 033760 000000 000000
00060: 000503 017140 033760 000000 000000 000504 017140 033760
00070: 000000 000505 000000 017140 000000 000000 000000 000000
00100: SAME: TO 000200-1

*T RECORD 2226 (%4262, #8B2)
00000: 036000 060156 023076 001630 000000 033760 164434 000440
00010: 017000 003560 000000 000003 000446 017000 111567 000004
```

```
00020: 000000 000440 017000 033760 035436 120500 000000 005000
00030: 031760 135336 000440 017340 000000 033760 000000 000502
00040: 017000 113231 000000 034001 035401 111562 073000 000440
00050: 000000 017000 031460 035412 120040 005000 000000 031460
00060: 000000 000440 017030 031466 000000 000000 000440 017360
00070: 031465 000000 000000 000440 000000 000000 000000 000000
00100: SAME: TO 000200-1


*T RECORD 2227 (%4263, #8B3)
00000: 036000 060156 047144 001706 000000 017270 031464 000000
00010: 000440 017270 000000 031463 033762 000440 006270 033760
00020: 000000 176702 000440 017000 031460 035453 000000 000040
00030: 016000 031760 176437 000440 000000 017300 031463 000000
00040: 000440 017070 000000 031464 000000 000440 017170 031465
00050: 000000 000000 000440 017170 031460 000000 000000 000440
00060: 017170 135731 034001 035417 000000 031760 135336 000440
00070: 017300 043260 000000 000000 000000 000000 000000 000000
00100: SAME: TO 000200-1


*T RECORD 2228 (%4264, #8B4)
00000: 036000 060156 133410 001764 000000 000440 017140 033760
00010: 000000 000502 000000 017000 031460 035467 000040 006000
00020: 000000 103460 000000 000440 017000 111560 000000 000004
00030: 000440 017000 031460 035422 000000 120040 005000 033760
00040: 177335 000440 000000 017000 031460 020646 000040 006000
00050: 000000 043260 000000 000440 017000 031460 000000 035500
00060: 000040 006000 103460 000000 000000 000440 017000 111560
00070: 000004 000440 000000 017000 000000 000000 000000 000000
00100: SAME: TO 000200-1


*T RECORD 2229 (%4265, #8B5)
00000: 036000 060156 057136 002042 000000 031460 035431 120040
00010: 005000 175574 000000 034001 035435 041260 035451 000440
00020: 000000 016030 031466 035133 000440 006300 000000 031461
00030: 000000 000440 017070 033465 000000 035133 000440 006000
00040: 031461 000000 000000 000440 017270 033464 035133 000440
00050: 000000 006000 031461 000000 000440 017270 000000 033463
00060: 035133 000440 006000 031461 000000 000000 000440 017270
00070: 111567 000001 000000 000440 000000 000000 000000 000000
00100: SAME: TO 000200-1


*T RECORD 2230 (%4266, #8B6)
00000: 036000 060156 121111 002120 000000 017000 031460 035451
00010: 020040 005000 000000 111567 000003 000440 017000 031460
00020: 000000 033762 020040 006000 033760 176754 000000 000440
00030: 017000 001471 034001 035453 000000 031460 014073 000040
00040: 006000 033760 000000 164434 000440 017000 001560 000003
00050: 000000 000440 017340 033760 074006 000440 000000 017000
00060: 033760 000000 000503 017240 000000 033760 000000 000502
00070: 017240 033760 000000 000000 000000 000000 000000 000000
00100: SAME: TO 000200-1


*T RECORD 2231 (%4267, #8B7)
00000: 036000 060156 026554 002176 000000 000501 017240 001560
00010: 000005 000440 000000 017360 031461 000000 000440 017170
00020: 000000 031462 000000 000440 017170 031463 000000 002111
00030: 000440 006170 031460 000000 000000 000040 007000 001560
00040: 176437 000440 000000 017340 031760 000000 000500 017000
```

464

```
00050: 000000 110034 034001 035471 031460 035474 000000 014040
00060: 005000 001562 000000 000500 000000 017070 041260 035476
00070: 000440 016030 000000 111562 000000 000000 000000 000000
00100: SAME: TO 000200-1


*T RECORD 2232 (%4270, #8B8)
00000: 036000 060156 102133 002254 000000 000000 000500 017070
00010: 101760 000000 000000 000440 017030 001560 176433 000440
00020: 000000 017360 031460 000000 000040 007000 000000 033760
00030: 000377 000441 017000 001560 000000 176433 000440 017340
00040: 031760 000000 000000 000500 017000 001560 164434 000040
00050: 000000 017340 031460 035506 020040 005000 000000 111760
00060: 035507 000500 016030 123461 000000 000000 000441 017000
00070: 062240 034001 000000 035507 000000 000000 000000 000000
00100: SAME: TO 000200-1


*T RECORD 2233 (%4271, #8B9)
00000: 036000 060156 003677 002332 000000 001561 000000 000500
00010: 007070 031760 000000 164431 000440 017340 031760 000000
00020: 000000 000500 017000 031460 000000 020040 000000 007000
00030: 031760 176426 000440 017340 000000 031760 000000 000500
00040: 017000 031460 000000 035522 020040 005000 041260 034210
00050: 000000 000440 006070 031760 033762 000440 000000 017030
00060: 033760 000100 000440 017000 000000 031460 035537 000040
00070: 016000 031460 000000 034124 000000 000000 000000 000000
00100: SAME: TO 000200-1 ·


*T RECORD 2234 (%4272, #8BA)
00000: 036000 060156 066167 002410 000000 000040 006000 031760
00010: 141733 000440 000000 017340 031760 000000 000500 017000
00020: 000000 052331 034001 035525 031460 035531 000000 114040
00030: 005000 031760 033762 000440 000000 017030 031760 135022
00040: 000440 017360 000000 031460 000000 000040 007000 101760
00050: 000000 000000 000440 017030 031760 176426 000000 000440
00060: 017360 031760 164442 000440 000000 017360 031460 033762
00070: 000040 006000 000000 031760 000000 000000 000000 000000
00100: SAME: TO 000200-1


*T RECORD 2235 (%4273, #8BB)
00000: 036000 060156 071345 002466 000000 026014 000440 017030
00010: 033760 000200 000000 000440 017000 031760 135022 000440
00020: 000000 017360 033760 000033 000441 017000 000000 001561
00030: 074402 000440 017340 033760 000000 177477 000441 017000
00040: 176741 034001 000000 035543 041561 000000 000500 017030
00050: 000000 031560 000000 000500 017070 031760 000000 101362
00060: 000440 017300 031760 100034 000000 000440 017070 031460
00070: 000000 000040 000000 007000 000000 000000 000000 000000
00100: SAME: TO 000200-1


*T RECORD 2236 (%4274, #8BC)
00000: 036000 060156 077721 002544 000000 041660 001700 001440
00010: 017036 033760 000000 035552 000500 016000 031760 164440
00020: 000000 000440 017340 033760 035615 000501 000000 006000
00030: 031460 035560 044040 005000 000000 033561 000001 000441
00040: 017000 033760 000000 001000 000443 017000 031460 035562
00050: 000000 000040 016000 043561 177776 000441 000000 017000
00060: 172530 034001 035561 033760 000000 000400 000443 017000
00070: 037460 000000 000000 000444 000000 000000 000000 000000
```

465

00100: SAME: TO 000200-1

*T RECORD 2237 (%4275, #8BD)
00000: 036000 060156 053370 002622 000000 017002 123564 000020
00010: 000444 017000 000000 123560 000020 000440 017000 031460
00020: 000000 035615 000040 006000 031461 000000 000000 000440
00030: 017070 033760 074006 000440 000000 017000 001560 000015
00040: 000440 017360 000000 031460 002111 000040 006000 031760
00050: 000000 164424 000440 017340 033760 000000 000000 000507
00060: 017000 001567 177470 000440 000000 017340 033760 000000
00070: 000502 017000 000000 031760 000000 000000 000000 000000
00100: SAME: TO 000200-1

*T RECORD 2238 (%4276, #8BE)
00000: 036000 060156 001550 002700 000000 101362 000440 017300
00010: 063642 034001 000000 035577 001562 100001 000440 017070
00020: 000000 001562 074402 000440 017340 033464 000000 000000
00030: 000440 017000 033760 000000 000000 000504 017000 033463
00040: 035615 000441 000000 006000 031760 176377 000440 017034
00050: 000000 041564 000000 000500 017030 111567 000000 000001
00060: 000440 017000 031561 035613 000000 020500 005070 111567
00070: 000004 000440 000000 017000 000000 000000 000000 000000
00100: SAME: TO 000200-1

*T RECORD 2239 (%4277, #8BF)
00000: 036000 060156 166155 002756 000000 031460 035613 020040
00010: 005000 111567 000000 000003 000440 017000 031460 033762
00020: 000000 020040 006000 031460 000000 000040 000000 007000
00030: 077314 034001 035615 033760 000000 007777 000442 017000
00040: 041562 000000 000000 003420 017010 041560 000017 001440
00050: 000000 017034 033760 000000 000502 017000 000000 031562
00060: 000000 003420 017010 031461 000000 000000 000440 017034
00070: 033760 000000 000000 000501 000000 000000 000000 000000
00100: SAME: TO 000200-1

*T RECORD 2240 (%4300, #8C0)
00000: 036000 060156 023431 003034 000000 007000 041260 000000
00010: 000440 017030 000000 031760 146224 000440 017360 031760
00020: 000000 164424 000440 017340 033760 000000 000000 000500
00030: 017000 111560 000004 000440 000000 017000 033760 040475
00040: 000040 017000 000000 031760 176533 005040 017030 071521
00050: 000000 034001 035633 031460 035635 120040 000000 005000
00060: 031760 176537 000440 017030 000000 031460 032632 000040
00070: 006000 031460 000000 000000 000000 000000 000000 000000
00100: SAME: TO 000200-1

*T RECORD 2241 (%4301, #8C1)
00000: 036000 060156 101757 003112 000000 000040 007000 031460
00010: 035701 054040 000000 005000 031760 176431 000440 017340
00020: 000000 033760 000000 000501 017000 031760 000000 176443
00030: 000440 017360 031460 000000 000000 000040 017160 031460
00040: 000000 000040 000000 017160 031460 000000 000040 017160
00050: 000000 031760 164424 000440 017340 033760 000000 000000
00060: 000502 017000 111562 000004 000000 000440 017000 060703
00070: 034001 035651 000000 031460 000000 000000 000000 000000
00100: SAME: TO 000200-1

*T RECORD 2242 (%4302, #8C2)

466

```
00000: 036000 060156 137776 003170 000000 035654 020040 005000
00010: 033461 035133 000000 000440 006000 031460 035670 000040
00020: 000000 016000 031760 135336 000440 017340 000000 033760
00030: 000000 000502 017000 111562 000000 073000 000440 017000
00040: 031460 035670 000000 020040 005000 043260 000000 000440
00050: 000000 017140 033760 000000 000502 017000 000000 031760
00060: 176437 000440 017300 031461 000000 035467 000440 006070
00070: 033760 177335 000000 000440 000000 000000 000000 000000
00100: SAME: TO 000200-1

*T RECORD 2243 (%4303, #8C3)
00000: 036000 060156 063357 003246 000000 017000 031460 020646
00010: 000040 006000 000000 043260 035500 000440 006000 152767
00020: 000000 034001 035667 033760 000000 000501 000000 017000
00030: 031461 000000 000440 017030 000000 031760 164434 000440
00040: 017360 031460 000000 000000 000040 017160 031460 000000
00050: 000000 000040 017160 033760 176754 000440 000000 017000
00060: 031460 014073 000040 006160 000000 031760 164431 000440
00070: 017340 031760 000000 000000 000000 000000 000000 000000
00100: SAME: TO 000200-1

*T RECORD 2244 (%4304, #8C4)
00000: 036000 060156 064115 003324 000000 000500 017000 031460
00010: 021412 120040 000000 006000 031460 000000 000040 007000
00020: 000000 031760 134721 000440 017340 033760 000000 000000
00030: 000500 017140 033760 030077 000000 000505 006000 020614
00040: 034001 035705 000000 031465 000000 000440 017030 031760
00050: 000000 164433 000440 017360 121160 000000 000000 000454
00060: 017270 033760 000000 000504 000000 017000 031760 176432
00070: 000440 017340 000000 031760 000000 000000 000000 000000
00100: SAME: TO 000200-1

*T RECORD 2245 (%4305, #8C5)
00000: 036000 060156 152034 003402 000000 000000 000500 017000
00010: 031460 035724 000000 120040 005000 101760 000000 000440
00020: 000000 017070 033760 177315 000440 017000 000000 031460
00030: 002745 000040 006000 031760 000000 135022 000440 017340
00040: 033760 026014 000000 000440 017000 121560 000000 000500
00050: 000000 017000 031460 035724 120040 005000 000000 046577
00060: 034001 035723 031760 033571 000000 000440 017070 031760
00070: 164430 000440 000000 017300 000000 000000 000000 000000
00100: SAME: TO 000200-1

*T RECORD 2246 (%4306, #8C6)
00000: 036000 060156 116657 003460 000000 101760 000000 000440
00010: 017070 033760 000000 074402 000441 017000 001561 000026
00020: 000000 000440 017340 033760 177477 000441 000000 017000
00030: 041561 000000 000500 017030 000000 033760 000200 000441
00040: 017000 103760 000000 000000 000443 017000 031561 035753
00050: 000000 000500 016070 031760 176432 000440 000000 017340
00060: 031760 000000 000500 017000 000000 031460 036015 020040
00070: 005000 031760 000000 164427 000000 000000 000000 000000
00100: SAME: TO 000200-1

*T RECORD 2247 (%4307, #8C7)
00000: 036000 060156 143137 003536 000000 000440 017340 054615
00010: 034001 035741 000000 033760 000000 000503 017000 031760
00020: 000000 134721 000440 017340 033760 000000 000000 000500
```

```
00030: 017140 033760 030077 000501 000000 006000 113174 000000
00040: 000440 017000 000000 031760 164432 000440 017340 111560
00050: 000000 000000 000500 017070 033760 000000 000000 000504
00060: 017140 111561 000000 000500 000000 017070 033760 000000
00070: 000505 017000 000000 033760 000000 000000 000000 000000
00100: SAME: TO 000200-1


*T RECORD 2248 (%4310, #8C8)
00000: 036000 060156 150277 003614 000000 074402 000441 017000
00010: 001561 000026 000000 000440 017340 033760 037777 000441
00020: 000000 017000 031463 000000 000440 017000 000000 051022
00030: 034001 035757 041561 035763 000000 020500 005030 033760
00040: 040000 000441 000000 017000 031561 000000 000500 017070
00050: 000000 041260 035766 000440 016030 033760 000000 100000
00060: 000441 017000 031561 000000 000000 000500 017070 101760
00070: 000000 000440 000000 017030 000000 000000 000000 000000
00100: SAME: TO 000200-1


*T RECORD 2249 (%4311, #8C9)
00000: 036000 060156 170221 003672 000000 031760 164427 000040
00010: 017360 033760 000000 074006 000046 017000 031460 035774
00020: 000000 120040 005000 001566 000011 000440 000000 017300
00030: 031464 000000 000440 017070 000000 031465 036014 000440
00040: 016170 033760 000000 100000 000447 017000 033377 034001
00050: 000000 035775 033760 140000 000451 017000 000000 031760
00060: 164432 000440 017340 033567 000000 000000 000510 017000
00070: 031760 000000 000000 000500 000000 000000 000000 000000
00100: SAME: TO 000200-1


*T RECORD 2250 (%4312, #8CA)
00000: 036000 060156 101443 003750 000000 017000 031460 036004
00010: 114040 005000 000000 113760 000000 000510 017000 033171
00020: 000000 000000 000450 017000 031460 000000 000000 000040
00030: 017140 031760 000000 000500 000000 017000 031460 036010
00040: 014040 005000 000000 031567 036012 000500 016030 113760
00050: 000000 000000 000507 017000 031167 000000 000000 000451
00060: 017030 001566 000012 000440 000000 017360 043714 034001
00070: 036013 031470 000000 000000 000000 000000 000000 000000
00100: SAME: TO 000200-1


*T RECORD 2251 (%4313, #8CB)
00000: 036000 060156 106326 004026 000000 000440 017270 031460
00010: 002111 000040 000000 006000 031760 101362 000440 017300
00020: 000000 031760 100027 000440 017070 031460 000000 000000
00030: 000040 007000 033760 176574 000000 000440 017000 031460
00040: 002745 000040 000000 006000 031760 164431 000440 017340
00050: 000000 031760 000000 000500 017000 031460 000000 033762
00060: 120040 006000 031760 164424 000000 000440 017340 033760
00070: 000000 000500 000000 017000 000000 000000 000000 000000
00100: SAME: TO 000200-1


*T RECORD 2252 (%4314, #8CC)
00000: 036000 060156 164561 004104 000000 031560 100000 000440
00010: 017030 101760 000000 074006 000440 017360 101103 034001
00020: 000000 036031 031460 002111 000040 006000 000000 031460
00030: 000000 000040 007000 033760 000000 051475 000440 017000
00040: 031760 176553 000000 005440 017030 031460 032632 000040
00050: 000000 006000 031460 000000 000040 007000 000000 031460
```

```
00060: 036050 054040 005000 031760 000000 176430 000440 017340
00070: 033760 000000 000000 000501 000000 000000 000000 000000
00100: SAME: TO 000200-1


*T RECORD 2253 (%4315, #8CD)
00000: 036000 060156 055466 004162 000000 017000 031760 164470
00010: 000440 017300 000000 123561 000144 000441 017000 105461
00020: 000000 000000 000441 017003 031461 000000 000000 000440
00030: 017070 033760 177033 000440 000000 017000 045724 034001
00040: 036047 031460 000000 014073 000040 006160 031460 000000
00050: 000000 000040 007000 033460 000000 000446 000000 017000
00060: 033760 176473 000440 017000 000000 031460 002745 000040
00070: 006000 033760 000000 176502 000000 000000 000000 000000
00100: SAME: TO 000200-1


*T RECORD 2254 (%4316, #8CE)
00000: 036000 060156 043526 004240 000000 000440 017000 031460
00010: 002745 000040 000000 006000 031760 164424 000440 017340
00020: 000000 033760 000000 000500 017000 033760 000000 100001
00030: 000450 017030 111560 000000 000000 000440 017000 031460
00040: 036064 120040 000000 005000 033760 100003 000450 017030
00050: 000000 031760 176511 000440 017360 137304 000000 034001
00060: 036065 031760 176473 000440 000000 017360 041566 000003
00070: 000440 017000 000000 031460 000000 000000 000000 000000
00100: SAME: TO 000200-1


*T RECORD 2255 (%4317, #8CF)
00000: 036000 060156 100123 004316 000000 036112 120040 005000
00010: 033760 000750 000000 000441 017000 033760 000027 000442
00020: 000000 017000 041566 000040 000440 017000 000000 031460
00030: 036100 020040 005000 033760 000000 000014 000442 017000
00040: 041566 000010 000000 000440 017000 031460 036100 020040
00050: 000000 005000 033760 000763 000441 017000 000000 031760
00060: 176512 000440 017300 031461 000000 000000 000440 017070
00070: 031462 000000 000000 000440 000000 000000 000000 000000
00100: SAME: TO 000200-1


*T RECORD 2256 (%4320, #8D0)
00000: 036000 060156 024650 004374 000000 017170 054310 034001
00010: 036103 031760 000000 176522 000440 017360 031461 000000
00020: 000000 000440 017270 033760 176511 000440 000000 017000
00030: 031460 002745 000040 006000 000000 033760 176520 000440
00040: 017000 031460 000000 002745 000040 006000 031460 036146
00050: 000000 000040 016000 033760 177346 000444 000000 017000
00060: 031466 000000 000440 017000 000000 031460 036116 044040
00070: 005000 003564 000000 000044 000000 000000 000000 000000
00100: SAME: TO 000200-1


*T RECORD 2257 (%4321, #8D1)
00000: 036000 060156 074270 004452 000000 000444 017000 033760
00010: 000013 000443 000000 017000 033760 000750 000441 017000
00020: 000000 033760 000564 000442 017000 034276 000000 034001
00030: 036121 041566 000040 000440 000000 017000 041566 000010
00040: 121440 017000 000000 031460 000000 122040 017000 031464
00050: 000000 000000 000440 017340 003561 036127 000000 050505
00060: 005140 033760 036132 000506 000000 016000 031460 036131
00070: 154040 005140 000000 003561 000000 000000 000000 000000
00100: SAME: TO 000200-1
```

```
*T RECORD 2258 (%4322, #8D2)
00000: 036000 060156 124531 004530 000000 000013 000445 017000
00010: 033760 000000 000000 000506 017000 003564 000003 000444
00020: 000000 017000 031760 176466 000440 017300 000000 031465
00030: 000000 000440 017070 031466 000000 000000 000440 017170
00040: 001162 000000 000000 000443 017170 026017 034001 036137
00050: 000000 033760 176465 000440 017300 031470 000000 025723
00060: 000440 006070 033760 176465 000000 000440 017300 031760
00070: 100000 000440 000000 017070 000000 000000 000000 000000
00100: SAME: TO 000200-1


*T RECORD 2259 (%4323, #8D3)
00000: 036000 060156 006016 004606 000000 031460 025725 000040
00010: 006000 013463 000000 000000 000443 017000 031460 036124
00020: 000000 114040 005000 031460 000000 000040 000000 007000
00030: 031760 131633 000440 017300 000000 031760 074133 000440
00040: 017070 031760 000000 164425 000440 017300 101760 000000
00050: 000000 000440 017070 031760 176427 000440 000000 017300
00060: 031760 000020 000440 017070 000000 070775 034001 036155
00070: 031460 036166 000000 000040 000000 000000 000000 000000
00100: SAME: TO 000200-1


*T RECORD 2260 (%4324, #8D4)
00000: 036000 060156 125365 004664 000000 006000 031460 000000
00010: 000040 007000 000000 031760 131633 000440 017300 031760
00020: 000000 074133 000440 017070 031760 164425 000000 000440
00030: 017300 041260 000000 000440 000000 017070 031760 176427
00040: 000440 017360 000000 031460 036166 000040 006000 031460
00050: 000000 000000 000040 007000 031460 000000 000000 000440
00060: 017340 031760 000000 000500 000000 017000 031460 036173
00070: 020040 005000 000000 031460 000000 000000 000000 000000
00100: SAME: TO 000200-1


*T RECORD 2261 (%4325, #8D5)
00000: 036000 060156 000667 004742 000000 036252 000040 006000
00010: 031460 036233 000000 000040 016000 140673 034001 036173
00020: 000000 033760 176447 000440 017000 031460 000000 002745
00030: 000040 006000 031760 176422 000000 000440 017300 031760
00040: 000014 000440 000000 017070 031760 000001 000440 017030
00050: 000000 031760 143026 000440 017360 031760 000000 145307
00060: 000440 017300 101760 000034 000000 000440 017070 031760
00070: 145657 000440 000000 017340 000000 000000 000000 000000
00100: SAME: TO 000200-1


*T RECORD 2262 (%4326, #8D6)
00000: 036000 060156 052320 005020 000000 033760 000000 000500
00010: 017000 031760 000000 145656 000440 017340 031760 000000
00020: 000000 000500 017000 031460 036211 020040 000000 005000
00030: 003560 000000 000500 017000 000000 051575 034001 036211
00040: 001560 177513 000000 000440 017340 031760 143027 000440
00050: 000000 017360 031760 164426 000440 017300 000000 041260
00060: 000000 000440 017070 031760 000000 074026 000440 017360
00070: 031760 135336 000000 000440 000000 000000 000000 000000
00100: SAME: TO 000200-1


*T RECORD 2263 (%4327, #8D7)
00000: 036000 060156 003617 005076 000000 017340 033760 000000
```

470

```
00010: 000500 017140 000000 033760 000000 000501 017140 121561
00020: 000000 000000 000500 017030 031760 177104 000000 000440
00030: 017360 111760 000000 000500 000000 017270 101760 176537
00040: 000440 017360 000000 111760 000000 000500 017170 031460
00050: 000000 000000 000440 017030 011262 034001 000000 036227
00060: 031760 177146 000440 017360 000000 031760 177154 000440
00070: 017360 031760 000000 177162 000000 000000 000000 000000
00100: SAME: TO 000200-1

*T RECORD 2264 (%4330, #8D8)
00000: 036000 060156 124326 005154 000000 000440 017360 031760
00010: 177170 001440 000000 017360 031460 036242 150040 005000
00020: 000000 031760 001007 000440 017340 031760 000000 000000
00030: 000500 017000 031460 036240 000000 020040 005000 031760
00040: 144742 000440 000000 017360 031460 002207 000040 006000
00050: 000000 031460 036425 050040 006000 033760 000000 010000
00060: 000440 017000 031760 000145 000000 000440 017340 031560
00070: 000000 000500 000000 017070 000000 000000 000000 000000
00100: SAME: TO 000200-1

*T RECORD 2265 (%4331, #8D9)
00000: 036000 060156 177415 005232 000000 050707 034001 036245
00010: 031760 145704 000000 000440 017300 031760 000003 000440
00020: 000000 017070 031760 135023 000440 017300 000000 031760
00030: 032766 000440 017070 031460 000000 000000 000040 007000
00040: 031760 164424 000000 000440 017340 033760 000000 000507
00050: 000000 017000 033760 164434 000440 017000 000000 111567
00060: 000000 000440 017000 031460 000000 003540 020040 006000
00070: 111567 000003 000000 000440 000000 000000 000000 000000
00100: SAME: TO 000200-1

*T RECORD 2266 (%4332, #8DA)
00000: 036000 060156 121037 005310 000000 017000 031460 036265
00010: 020040 005000 000000 111567 000004 000440 017000 031460
00020: 000000 036265 020040 005000 007342 034001 000000 036263
00030: 111567 000006 000440 017000 000000 031460 036275 014040
00040: 005000 031760 000000 143032 000440 017340 033760 000000
00050: 000000 000500 017000 031760 145656 000440 000000 017340
00060: 113560 000000 000500 017000 000000 111560 000000 000440
00070: 017000 031460 000000 036274 000000 000000 000000 000000
00100: SAME: TO 000200-1

*T RECORD 2267 (%4333, #8DB)
00000: 036000 060156 101115 005366 000000 020040 005000 111560
00010: 000011 000440 000000 017000 031460 036020 020040 006000
00020: 000000 031760 176423 000440 017340 031760 000000 000000
00030: 000500 017000 031460 036313 000000 020040 005000 001567
00040: 177456 000440 000000 017340 142155 034001 036301 031460
00050: 000000 003616 000040 006000 041260 000000 000000 000440
00060: 017030 031760 101362 000440 000000 017360 031760 176426
00070: 000440 017340 000000 031760 000000 000000 000000 000000
00100: SAME: TO 000200-1

*T RECORD 2268 (%4334, #8DC)
00000: 036000 060156 004450 005444 000000 000000 000500 017000
00010: 031460 036313 000000 020040 005000 031460 034162 000040
00020: 000000 006000 031760 164442 000440 017300 000000 101760
00030: 000000 000440 017070 031460 000000 033762 000040 006000
```

```
00040: 031760 176424 000000 000440 017340 031760 135022 000440
00050: 000000 017360 031760 164430 000440 017300 000000 101760
00060: 000000 005440 017070 011516 000000 034001 036317 031460
00070: 002111 000040 000000 006000 000000 000000 000000 000000
00100: SAME: TO 000200-1


*T RECORD 2269 (%4335, #8DD)
00000: 036000 060156 144224 005522 000000 031760 145657 000440
00010: 017340 033760 000000 000000 000500 017000 031460 036335
00020: 000000 020040 005000 031760 164424 000440 000000 017340
00030: 033760 000005 000441 017000 000000 121561 000000 000500
00040: 017000 021561 000000 036330 020500 005000 031460 036335
00050: 000000 120040 005000 031460 000000 000440 000000 017030
00060: 031460 000000 000100 015000 000000 031460 036377 000040
00070: 006000 031460 000000 000000 000000 000000 000000 000000
00100: SAME: TO 000200-1


*T RECORD 2270 (%4336, #8DE)
00000: 036000 060156 134670 005600 000000 000040 011000 033760
00010: 000000 000400 000000 017000 043114 034001 036335 031760
00020: 000000 145656 000440 017340 003560 000000 000000 000500
00030: 017000 001560 177513 000440 000000 017340 031760 143027
00040: 000440 017360 000000 101760 000000 000440 017030 031760
00050: 000000 143026 000440 017360 031460 000000 000000 000040
00060: 007000 031760 135022 000440 000000 017340 033760 000000
00070: 000500 017000 000000 041260 000000 000000 000000 000000
00100: SAME: TO 000200-1


*T RECORD 2271 (%4337, #8DF)
00000: 036000 060156 171412 005656 000000 000000 000440 017070
00010: 031760 135023 000000 000440 017360 031760 176424 000440
00020: 000000 017300 031460 033744 000440 006070 000000 031760
00030: 164431 000440 017340 115061 000000 034001 036353 031760
00040: 176423 000440 000000 017360 031760 000000 000500 017000
00050: 000000 031460 036367 020040 005000 031760 000000 164431
00060: 000440 017300 041260 021331 000000 000440 006070 033760
00070: 177251 000440 000000 017000 000000 000000 000000 000000
00100: SAME: TO 000200-1


*T RECORD 2272 (%4340, #8E0)
00000: 036000 060156 131375 005734 000000 031460 021362 000040
00010: 006000 033760 000000 177261 000440 017000 031460 002745
00020: 000000 000040 006000 031760 176426 000440 000000 017340
00030: 031760 000000 000500 017000 000000 031460 034210 120040
00040: 006000 031760 000000 145704 000440 017300 041260 003564
00050: 000000 000440 006070 130516 034001 036371 000000 031760
00060: 000145 000440 017340 033760 000000 010000 000440 017000
00070: 031560 000000 000000 000500 000000 000000 000000 000000
00100: SAME: TO 000200-1


*T RECORD 2273 (%4341, #8E1)
00000: 036000 060156 166724 006012 000000 017070 033760 176557
00010: 000440 017000 000000 031460 002745 000040 006000 031460
00020: 000000 000000 000040 007000 031760 164424 000000 000440
00030: 017300 031760 000000 000440 000000 017070 101760 074006
00040: 000440 017360 000000 033760 000377 000440 017000 033760
00050: 000000 000063 000442 017000 103760 000000 000000 000443
00060: 017000 033760 000025 000444 000000 017000 033760 000024
```

472

```
00070: 000445 017000 000000 153465 000000 000000 000000 000000
00100: SAME: TO 000200-1


*T RECORD 2274 (%4342, #8E2)
00000: 036000 060156 133014 006070 000000 034001 036407 043260
00010: 036627 000441 000000 006000 033760 164434 000440 017000
00020: 000000 031460 003540 000040 006000 033760 000000 177343
00030: 000440 017000 031460 020646 000000 000040 006000 033760
00040: 176603 000440 000000 017000 031460 014073 000040 006000
00050: 000000 033760 176702 000440 017000 031460 000000 014073
00060: 000040 006000 033760 177033 000000 000440 017000 031460
00070: 014073 000040 000000 006000 000000 000000 000000 000000
00100: SAME: TO 000200-1


*T RECORD 2275 (%4343, #8E3)
00000: 036000 060156 136454 006146 000000 033760 177047 000440
00010: 017000 031460 000000 014073 000040 006000 031460 000000
00020: 000000 000040 007000 177567 034001 036425 000000 031760
00030: 164424 000440 017300 031760 000000 000001 000440 017070
00040: 101760 074006 000000 000440 017360 043260 000000 000440
00050: 000000 017000 033760 000377 000442 017000 000000 103760
00060: 000000 000443 017000 033760 000000 000026 000444 017000
00070: 043260 036627 000000 000441 000000 000000 000000 000000
00100: SAME: TO 000200-1


*T RECORD 2276 (%4344, #8E4)
00000: 036000 060156 013030 006224 000000 006000 033760 000034
00010: 000440 017000 000000 001560 074402 000440 017300 031760
00020: 000000 052525 000440 017070 033760 176612 000000 000440
00030: 017000 031460 014073 000040 000000 006000 033760 176754
00040: 000440 017000 000000 152012 034001 036443 031460 014073
00050: 000000 000040 006000 031760 164427 000440 000000 017300
00060: 101760 000000 000440 017070 000000 041260 000000 000440
00070: 017030 031760 000000 164432 000000 000000 000000 000000
00100: SAME: TO 000200-1


*T RECORD 2277 (%4345, #8E5)
00000: 036000 060156 161701 006302 000000 000440 017360 031460
00010: 000000 000040 000000 017160 031760 176432 000440 017360
00020: 000000 033760 177277 000440 017000 031460 000000 002745
00030: 000040 006000 033760 177306 000000 000440 017000 031460
00040: 014073 000040 000000 006000 031460 000000 000040 007000
00050: 000000 031760 164424 000440 017300 031760 000000 000002
00060: 000440 017070 150234 034001 000000 036461 101760 074006
00070: 000440 017360 000000 033760 000000 000000 000000 000000
00100: SAME: TO 000200-1


*T RECORD 2278 (%4346, #8E6)
00000: 036000 060156 032055 006360 000000 177777 000440 017000
00010: 033760 177777 000000 000441 017000 033760 000377 000442
00020: 000000 017000 033760 000027 000444 017000 000000 043260
00030: 036627 000443 006000 033760 000000 176621 000440 017000
00040: 031460 014073 000000 000040 006000 033760 176754 000440
00050: 000000 017000 031460 014073 000040 006000 000000 031460
00060: 000000 000040 007000 031760 000000 164424 000440 017300
00070: 033760 000003 000000 000440 000000 000000 000000 000000
00100: SAME: TO 000200-1
```

```
*T RECORD 2279 (%4347, #8E7)
00000: 036000 060156 174354 006436 000000 017070 031560 100000
00010: 000440 017030 000000 044326 034001 036477 101760 074006
00020: 000000 000440 017360 033760 177773 000440 000000 017000
00030: 033760 177773 000441 017000 000000 033760 000377 000442
00040: 017000 033760 000000 000033 000444 017000 043260 036627
00050: 000000 000443 006000 033760 000034 000440 000000 017000
00060: 001560 074402 000440 017300 000000 031760 052525 000440
00070: 017070 033760 000000 176630 000000 000000 000000 000000
00100: SAME: TO 000200-1

*T RECORD 2280 (%4350, #8E8)
00000: 036000 060156 163134 006514 000000 000440 017000 031460
00010: 014073 000040 000000 006000 033760 176754 000440 017000
00020: 000000 031460 014073 000040 006000 031460 000000 000000
00030: 000040 007000 077053 034001 000000 036515 031760 164424
00040: 000440 017300 000000 033760 000004 000440 017070 031560
00050: 000000 100000 000440 017030 101760 074006 000000 000440
00060: 017360 033760 177773 000440 000000 017000 031760 135336
00070: 000440 017340 000000 033760 000000 000000 000000 000000
00100: SAME: TO 000200-1

*T RECORD 2281 (%4351, #8E9)
00000: 036000 060156 124741 006572 000000 000000 000501 017000
00010: 111561 073000 000000 000440 017000 031460 036542 020040
00020: 000000 005000 111561 022400 000440 017000 000000 031460
00030: 036541 020040 005000 031460 000000 000000 000040 017140
00040: 121560 000000 000000 000500 017030 031760 176437 000440
00050: 000000 017360 014121 034001 036533 033760 000000 177335
00060: 000440 017000 031460 020646 000000 000040 006000 031760
00070: 164434 000440 000000 017340 000000 000000 000000 000000
00100: SAME: TO 000200-1

*T RECORD 2282 (%4352, #8EA)
00000: 036000 060156 042037 006650 000000 033760 000000 000500
00010: 017000 123560 000000 000377 000440 017000 031460 036542
00020: 000000 000040 016000 033760 000015 000440 000000 017000
00030: 033760 177773 000441 017000 000000 033760 000377 000442
00040: 017000 033760 000000 000033 000444 017000 043260 036627
00050: 000000 000443 006000 033760 000034 000440 000000 017000
00060: 001560 074402 000440 017300 000000 031760 052525 000440
00070: 017070 063651 000000 034001 000000 000000 000000 000000
00100: SAME: TO 000200-1

*T RECORD 2283 (%4353, #8EB)
00000: 036000 060156 041242 006726 000000 036551 033760 176637
00010: 000440 017000 000000 031460 014073 000040 006000 033760
00020: 000000 176754 000440 017000 031460 014073 000000 000040
00030: 006000 031460 000000 000040 000000 007000 031760 164424
00040: 000440 017300 000000 031760 000005 000440 017070 101760
00050: 000000 074006 000440 017360 031760 176422 000000 000440
00060: 017300 031760 000003 000440 000000 017070 043260 000000
00070: 000440 017000 000000 043260 000000 000000 000000 000000
00100: SAME: TO 000200-1

*T RECORD 2284 (%4354, #8EC)
00000: 036000 060156 023412 007004 000000 000000 000441 017000
00010: 033760 000377 000000 000442 017000 033760 000042 000444
```

```
00020: 000000 017000 121306 034001 036567 033760 000000 000144
00030: 000445 017000 043260 036627 000000 000443 006000 031760
00040: 164470 000440 000000 017300 033760 176456 000440 017000
00050: 000000 041260 002745 000440 006070 033760 000000 176646
00060: 000440 017160 031460 014073 000000 000040 006000 033760
00070: 177033 000440 000000 017000 000000 000000 000000 000000
00100: SAME: TO 000200-1


*T RECORD 2285 (%4355, #8ED)
00000: 036000 060156 153413 007062 000000 031460 014073 000040
00010: 006000 033760 000000 177047 000440 017000 031460 014073
00020: 000000 000040 006000 031460 000000 000040 000000 007000
00030: 031760 164424 000440 017300 000000 031760 000006 000440
00040: 017070 162470 000000 034001 036605 101760 074006 000440
00050: 000000 017360 031760 176422 000440 017340 000000 033760
00060: 000073 000440 017000 121560 000000 000000 000500 017000
00070: 031460 036613 000000 040040 000000 000000 000000 000000
00100: SAME: TO 000200-1


*T RECORD 2286 (%4356, #8EE)
00000: 036000 060156 130377 007140 000000 005000 031460 000000
00010: 000440 017070 000000 043260 000000 000440 017000 043260
00020: 000000 000000 000441 017000 043260 000000 000000 000442
00030: 017000 033760 000043 000444 000000 017000 043260 036627
00040: 000443 006000 000000 033760 176456 000440 017000 031460
00050: 000000 002745 000040 006000 033760 176655 000000 000440
00060: 017000 155057 034001 036623 000000 031460 014073 000040
00070: 006000 033760 000000 177047 000000 000000 000000 000000
00100: SAME: TO 000200-1


*T RECORD 2287 (%4357, #8EF)
00000: 036000 060156 040526 007216 000000 000440 017000 031460
00010: 014073 000040 000000 006000 031460 000000 000040 007000
00020: 000000 031760 001007 000440 017340 033760 000000 000121
00030: 000452 017000 031760 000000 000000 000500 017000 031460
00040: 036640 020040 000000 005000 031760 144742 000440 017340
00050: 000000 043260 000000 000452 017000 033760 000000 000000
00060: 000511 017000 031760 176427 000000 000440 017340 031571
00070: 000000 000500 000000 017070 000000 000000 000000 000000
00100: SAME: TO 000200-1


*T RECORD 2288 (%4360, #8F0)
00000: 036000 060156 167070 007274 000000 021760 000000 000440
00010: 017030 160267 000000 034001 036641 031760 101417 000440
00020: 000000 017360 031462 000000 000440 017030 000000 031760
00030: 176421 000440 017360 031460 000000 000000 000440 017030
00040: 031760 164434 000000 000440 017360 031460 000001 000240
00050: 000000 017160 033760 074006 000451 017000 000000 001571
00060: 000005 000440 017360 031460 000000 000001 000240 017160
00070: 041260 000000 000000 000640 000000 000000 000000 000000
00100: SAME: TO 000200-1


*T RECORD 2289 (%4361, #8F1)
00000: 036000 060156 061210 007352 000000 017170 031760 176430
00010: 000440 017300 000000 031465 000000 000440 017070 031461
00020: 000000 000000 000440 017030 031760 176443 000000 000440
00030: 017360 104247 034001 036657 000000 031460 000001 000240
00040: 017160 031760 000000 164440 000440 017300 041260 000000
```

```
00050: 000000 000440 017070 001571 000015 000440 000000 017360
00060: 031760 176427 000440 017340 000000 001564 074402 000440
00070: 017300 033760 000000 052504 000000 000000 000000 000000
00100: SAME: TO 000200-1


*T RECORD 2290 (%4362, #8F2)
00000: 036000 060156 170472 007430 000000 000440 017000 031560
00010: 000000 000500 000000 017070 031472 000000 000440 017030
00020: 000000 031460 036677 120040 005000 031760 000000 164426
00030: 000440 017340 033760 000125 000000 000440 017000 031760
00040: 000000 000500 000000 017000 031460 036676 020040 005000
00050: 000000 027501 034001 036675 033760 000131 000000 000440
00060: 017000 031460 000000 000440 000000 017030 001564 074476
00070: 000440 017360 000000 031760 000000 000000 000000 000000
00100: SAME: TO 000200-1


*T RECORD 2291 (%4363, #8F3)
00000: 036000 060156 154654 007506 000000 101362 000440 017300
00010: 001564 100001 000000 000440 017070 031760 176420 000440
00020: 000000 017300 033463 036051 000440 006070 000000 031760
00030: 176420 000440 017340 033760 000000 000000 000500 017140
00040: 033760 000000 000000 000501 017140 001571 000004 000440
00050: 000000 017360 031461 000000 000440 017270 000000 031460
00060: 000000 000440 017270 031760 000000 164424 000440 017340
00070: 153066 034001 000000 036713 000000 000000 000000 000000
00100: SAME: TO 000200-1


*T RECORD 2292 (%4364, #8F4)
00000: 036000 060156 145500 007564 000000 033760 000001 000440
00010: 017000 121560 000000 000000 000500 017000 031460 002111
00020: 000000 120040 006000 031460 034642 000040 000000 006000
00030: 031760 164431 000440 017340 000000 031760 000000 000500
00040: 017000 031460 000000 036727 020040 005000 041260 021331
00050: 000000 000440 006070 033760 177251 000440 000000 017000
00060: 031460 021362 000040 006000 000000 033760 177261 000440
00070: 017C00 031460 000000 002745 000000 000000 000000 000000
00100: SAME: TO 000200-1


*T RECORD 2293 (%4365, #8F5)
00000: 036000 060156 010620 007642 000000 000040 006000 033760
00010: 177315 000440 000000 017000 031460 002745 000040 006000
00020: 000000 040133 024001 036731 031760 176426 000000 000440
00030: 017340 031760 000000 000500 000000 017000 031460 036735
00040: 020040 005000 000000 041260 034210 000440 006070 031460
00050: C00000 033744 000040 006000 031760 135022 000000 000440
00060: 017300 031760 026014 000440 000000 017070 033760 176574
00070: 0C0440 017000 000000 031460 000000 000000 000000 000000
00100: SAME: TO 000200-1


*T RECORD 2294 (%4366, #8F6)
00000: 036000 060156 064622 007720 000000 002745 000040 006000
00010: 031460 000000 000000 000040 007000 162507 002400 176423
00020: 000000 000000 000000 000000 000000 000000 000000 176423
00030: 034000 176447 100000 000000 000000 001000 000564 000014
00040: 000377 000377 000000 100001 000246 000503 000564 000014
00050: 000000 000000 000000 100001 000000 000000 000000 000000
00060: 000001 000000 100001 000750 000000 000030 000564 000014
00070: 000000 000000 000000 100000 000000 000000 000000 000000
```

```
00100: SAME: TO 000200-1

*T RECORD 2295 (%4367, #8F7)
00000: 036000 060156 011005 007776 000000 000750 000030 000564
00010: 000014 000377 000000 000377 100001 000750 000027 000564
00020: 000000 000014 000377 000377 100000 000750 000000 000027
00030: 000564 000014 000000 000000 000000 035103 000000 000144
00040: 176430 035637 000000 177634 000144 176431 004204 034000
00050: 000000 176537 035637 000000 000000 176431 000000 035162
00060: 000000 000106 176422 035162 000000 000000 000073 176422
00070: 036037 000000 000000 000144 000000 000000 000000 000000
00100: SAME: TO 000200-1

*T RECORD 2296 (%4370, #8F8)
00000: 036000 060156 127516 010054 000000 176430 100004 000672
00010: 000106 000564 000000 000014 000000 000000 100004 000672
00020: 000000 000564 000012 000001 146235 100007 000000 000000
00030: 001000 000000 000600 000000 000000 000000 100001 000246
00040: 000564 000001 000000 000004 176664 177777 100001 000246
00050: 000000 000564 000001 000004 176666 177777 000000 100001
00060: 000246 000564 000001 000004 000000 176670 132640 034000
00070: 176627 177777 000000 100001 000000 000000 000000 000000
00100: SAME: TO 000200-1

*T RECORD 2297 (%4371, #8F9)
00000: 036000 060156 121645 010132 000000 000246 000564 000001
00010: 000004 176672 000000 177777 100001 000246 000564 000001
00020: 000000 000004 176674 177777 100001 000246 000000 000564
00030: 000001 000004 176676 177777 000000 100001 000246 000564
00040: 000001 000004 000000 176700 177777 051520 051131 041517
00050: 000000 050131 041505 052103 042524 041510 000000 043105
00060: 052103 041114 052522 051510 000000 051120 100001 000302
00070: 000564 000001 000000 000003 000000 000000 000000 000000
00100: SAME: TO 000200-1

*T RECORD 2298 (%4372, #8FA)
00000: 036000 060156 143417 010210 000000 177067 000327 000564
00010: 000001 030003 000000 176443 000354 000564 160175 034000
00020: 000000 176717 000001 000003 177071 000401 000000 000564
00030: 000001 030003 176444 000426 000000 000564 000001 000003
00040: 177073 000453 000000 000564 000001 030003 176445 000500
00050: 000000 000564 000001 000003 177075 000525 000000 000564
00060: 000001 030003 176446 177777 000000 100001 000302 000564
00070: 000001 000003 000000 177067 000000 000000 000000 000000
00100: SAME: TO 000200-1

*T RECORD 2299 (%4373, #8FB)
00000: 036000 060156 055255 010266 000000 000327 000564 000001
00010: 030004 176443 000000 000363 000564 000001 000003 177071
00020: 000000 000410 000564 000001 030004 176444 000000 000444
00030: 000564 000001 000003 177073 000000 000471 067537 034000
00040: 177007 000564 000000 000001 030004 176445 000525 000564
00050: 000000 000001 000003 177075 000552 000564 000000 000001
00060: 030004 176446 000606 000564 000000 000001 000002 177077
00070: 177777 100001 000000 000552 000000 000000 000000 000000
00100: SAME: TO 000200-1

*T RECORD 2300 (%4374, #8FC)
```

```
00000: 036000 060156 146470 010344 000000 000564 000001 000003
00010: 177063 000577 000000 000564 000001 030003 176430 177777
00020: 000000 100001 000624 000564 000001 000003 000000 177065
00030: 000651 000564 000001 030002 000000 176422 177777 020123
00040: 036440 020124 000000 036440 020103 036440 020115 036440
00050: 000000 020131 036440 020102 036440 171034 000000 034000
00060: 177077 020040 000000 177634 000000 000144 000000 000000
00070: 000004 000202 000000 000447 000000 000000 000000 000000
00100: SAME: TO 000200-1
```

*T RECORD 2301 (%4375, #8FD)
```
00000: 036000 060156 106140 010422 000000 177175 030004 000000
00010: 176443 177100 000000 177102 177177 030004 000000 176444
00020: 000000 177100 177102 177201 030004 000000 000000 176445
00030: 177100 177102 177203 030004 000000 000000 176446 177100
00040: 177102 177777 000000 000004 000202 000447 177175 030004
00050: 000000 000000 176443 177103 177104 177177 000000 030004
00060: 000000 176444 177103 177104 000000 177201 030004 000000
00070: 176445 177103 000000 177104 000000 000000 000000 000000
00100: SAME: TO 000200-1
```

*T RECORD 2302 (%4376, #8FE)
```
00000: 036000 060156 041114 010500 000000 177203 034557 034000
00010: 177167 030004 000000 000000 176446 177103 177104 177777
00020: 000000 020103 020040 020115 020040 020131 000000 020040
00030: 020102 020040 000004 000202 000000 000447 177175 030004
00040: 022440 176443 000000 177101 177102 177177 030004 022440
00050: 000000 176444 177101 177102 177201 030004 000000 022440
00060: 176445 177101 177102 177203 000000 030004 022440 176446
00070: 177101 177102 000000 177777 000000 000000 000000 000000
00100: SAME: TO 000200-1
```

*T RECORD 2303 (%4377, #8FF)
```
00000: 036000 060156 177013 010556 000000 041563 072162 046563
00010: 072162 054563 000000 072162 041163 072162 000001 000076
00020: 000000 000447 177257 030004 177777 107530 000000 034000
00030: 177257 040514 046040 100003 000000 000202 000231 000423
00040: 000024 000000 000000 000000 100003 000202 000231 000423
00050: 000000 000024 000377 000377 100000 000420 000000 000167
00060: 000000 000014 000377 000377 000000 100001 000420 000000
00070: 000001 000021 000000 177324 000000 000000 000000 000000
00100: SAME: TO 000200-1
```

*T RECORD 2304 (%4400, #900)
```
00000: 036000 060156 041537 010634 000000 177777 100014 000420
00010: 000167 000000 000000 000014 000000 000000 046501 051113
00020: 000000 020123 047525 051103 042440 050117 000000 044516
00030: 052040 176437 164434 137413 000000 176443 164434 137413
00040: 164434 176443 000000 135412 000000 113766 034000 177347
00050: 000000 000027 000014 000001 000025 000013 000000 000002
00060: 000023 000012 000003 000021 000000 000011 000004 000017
00070: 000010 000005 000000 000015 000000 000000 000000 000000
00100: SAME: TO 000200-1
```

*T RECORD 2305 (%4401, #901)
```
00000: 036000 060156 121064 010712 000000 000007 000006 000013
00010: 000006 000007 000000 000011 000005 000010 000007 000004
00020: 000000 000011 000005 000003 000012 000003 000000 000002
```

478

```
00030: 000013 000001 000001 000000 000000 000027 000014 000003
00040: 000021 000011 000000 000005 000015 000007 000006 000013
00050: 000000 000006 000007 000011 000005 000010 000000 000007
00060: 000004 000011 000005 000003 000000 000260 027400 177437
00070: 000011 000005 000000 000003 000000 000000 000000 000000
00100: SAME: TO 000200-1

*T RECORD 2306 (%4402, #902)
00000: 035000 060155 140615 010770 000000 000012 000003 000002
00010: 000012 000003 000000 000002 000013 000001 000001 000013
00020: 000000 000001 000001 035240 035265 035256 000000 035265
00030: 035265 000025 000026 000027 000000 000033 000033 000025
00040: 000034 000027 000000 000034 000034 000042 000043 000000
00050: 000000 000050 000060 177777 000001 000051 000000 000061
00060: 177777 000002 000052 000062 000000 177777 000002 000006
00070: 000004 023454 000000 000000 000000 000000 000000 000000
00100: SAME: TO 000200-1

*T RECORD 2307 (%4403, #903)
00000: 002000 120000 120000 000000 000000 000000 000000 000000
00010: SAME: TO 000200-1

*T RECORD 2308 (%4404, #904)
00000: 025000 020000 132633 077124 051116 051440 001235 000000
00010: SAME: TO 000020-1
00020: 000000 020111 046501 043505 051055 052122 040516 051503
00030: 047514 026040 047523 047101 052074 034071 030461 031065
00040: 027060 030064 033476 020040 020040 020040 020040 020040
00050: 020040 020040 000000 000000 000000 000000 000000 000000
00060: SAME: TO 000200-1

*T RECORD 2309 (%4405, #905)
00000: 003400 040001 061643 077124 051116 051400 000000 000000
00010: SAME: TO 000200-1

*T RECORD 2310 (%4406, #906)
00000: 036000 060156 023225 000000 000000 001234 002400 146307
00010: 100017 000000 000000 001000 000000 000001 047327 000400
00020: 000000 146315 146316 114633 034001 032766 000000 031760
00030: 001007 000440 017340 031760 000000 000000 000500 017000
00040: 031460 000000 000000 021040 017000 033760 000045 000440
00050: 000000 017000 001560 141646 000440 017340 000000 023760
00060: 000000 000517 017140 033760 000000 000000 000500 017140
00070: 101577 000000 000000 000500 000000 000000 000000 000000
00100: SAME: TO 000200-1

*T RECORD 2311 (%4407, #907)
00000: 036000 060156 015475 000056 000000 017030 031460 000000
00010: 000100 015140 000000 031760 146311 000440 017360 031460
00020: 000000 000000 000440 017270 033760 150316 000000 000455
00030: 017000 033760 000377 000450 000000 017000 103477 000000
00040: 000457 011000 000000 127317 034001 033004 111577 000000
00050: 000000 000400 015000 031460 033142 114040 000000 005000
00060: 031760 146312 000440 017300 000000 031460 033012 050040
00070: 005000 001577 000000 001000 000000 000000 000000 000000
00100: SAME: TO 000200-1

*T RECORD 2312 (%4410, #908)
```

```
00000: 036000 060156 072452 000134 000000 000440 017070 031460
00010: 033013 000040 000000 016000 031477 000000 000440 017070
00020: 000000 033760 146307 000440 017100 041260 000000 025200
00030: 000440 006170 033760 177776 000000 000452 017000 003572
00040: 000002 000452 000000 017000 031760 146311 000440 017340
00050: 000000 033760 000377 000453 017000 037760 000000 000000
00060: 000501 017002 142625 034001 000000 033022 121172 000000
00070: 000441 017000 000000 031460 000000 000000 000000 000000
00100: SAME: TO 000200-1


*T RECORD 2313 (%4411, #909)
00000: 036000 060156 163415 000212 000000 033122 020040 005000
00010: 001572 146316 000000 000440 017340 043573 000000 000502
00020: 000000 017000 031760 000000 002500 017034 000000 043573
00030: 000000 000501 017140 043573 000000 000000 000504 017000
00040: 031760 000000 000000 002500 017034 043573 000000 000503
00050: 000000 017000 103760 000000 000440 017000 000000 103473
00060: 000000 000453 017000 033760 000000 177400 000456 017000
00070: 043260 000000 000000 000451 000000 000000 000000 000000
00100: SAME: TO 000200-1


*T RECORD 2314 (%4412, #90A)
00000: 036000 060156 051130 000270 000000 017000 003173 000000
00010: 000456 017000 000000 172233 034001 033040 001161 000000
00020: 000000 000456 017300 001575 000000 000520 000000 017340
00030: 003571 000000 000511 017000 000000 003173 000000 000456
00040: 017000 001162 000000 000000 000456 017300 001575 000000
00050: 000000 000520 017340 003571 000000 000511 000000 017000
00060: 003173 000000 000456 017000 000000 001163 000000 000456
00070: 017300 001575 000000 000000 000000 000000 000000 000000
00100: SAME: TO 000200-1


*T RECORD 2315 (%4413, #90B)
00000: 036000 060156 046757 000346 000000 000520 017340 003571
00010: 000000 000511 000000 017000 003173 000000 000456 017000
00020: 000000 001164 000000 000456 017300 001575 000000 000000
00030: 000520 017340 031627 034001 000000 033056 030760 000000
00040: 000500 017000 000000 031760 130500 000440 017340 021760
00050: 000000 000000 000500 017000 031460 033101 000000 020040
00060: 005000 101760 000000 000500 000000 017000 031460 033101
00070: 020440 005030 000000 031461 000000 000000 000000 000000
00100: SAME: TO 000200-1


*T RECORD 2316 (%4414, #90C)
00000: 036000 060156 147075 000424 000000 000000 000500 015030
00010: 031460 000000 000000 000100 015000 033471 003435 000440
00020: 000000 006000 031461 000000 000440 017000 000000 043260
00030: 033074 020051 005000 031460 000000 033076 014040 005000
00040: 033760 000377 000000 000451 017000 031460 033076 000040
00050: 000000 016000 162461 034001 033074 041660 000000 177400
00060: 002440 017034 033760 000000 000000 000511 017000 031460
00070: 000000 000040 000000 011000 000000 000000 000000 000000
00100: SAME: TO 000200-1


*T RECORD 2317 (%4415, #90D)
00000: 036000 060156 012354 000502 000000 033760 000000 000401
00010: 011000 033760 000000 033107 000400 016000 003071 000000
00020: 000000 000451 017000 041571 177400 000440 000000 017000
```

```
00030: 031460 033107 020040 005000 000000 031460 033106 014040
00040: 005000 013473 000000 033107 000451 016000 043260 000000
00050: 000000 000451 017000 013460 000000 000454 000000 017000
00060: 103460 000000 000040 017000 000000 013474 033135 020454
00070: 005000 154766 000000 034001 000000 000000 000000 000000
00100: SAME: TO 000200-1


*T RECORD 2318 (%4416, #90E)
00000: 036000 060156 036556 000560 000000 033112 013474 033136
00010: 020454 005000 000000 031460 033137 020040 005000 033471
00020: 000000 000000 000450 017000 001572 146316 000000 000440
00030: 017300 031465 000000 002440 000000 017034 031566 000000
00040: 000500 017070 000000 031467 000000 002440 017034 031570
00050: 000000 033016 000500 016170 031760 146312 000000 000440
00060: 017300 031477 000000 000440 000000 017070 033760 146307
00070: 000440 017100 000000 031760 000000 000000 000000 000000
00100: SAME: TO 000200-1


*T RECORD 2319 (%4417, #90F)
00000: 036000 060156 076423 000636 000000 100000 000440 017170
00010: 031760 130500 000000 000440 017340 031760 000000 000500
00020: 000000 017000 151610 034001 033130 031460 000000 033133
00030: 014040 005000 031460 025200 000000 000040 006000 031460
00040: 033003 000040 000000 016000 031460 033144 000040 006000
00050: 000000 031460 033003 000040 016000 033471 000000 033036
00060: 000445 016000 033471 033036 000000 000446 016000 033471
00070: 000000 000447 000000 017000 000000 000000 000000 000000
00100: SAME: TO 000200-1


*T RECORD 2320 (%4420, #910)
00000: 036000 060156 063447 000714 000000 121560 000004 000440
00010: 017000 033036 000000 033115 014040 001000 031760 130500
00020: 000000 000440 011300 041260 000000 000440 000000 007070
00030: 031760 041401 000440 017700 000000 031760 100001 014440
00040: 017470 027727 000000 034001 033146 031760 000333 000440
00050: 000000 017760 031760 043001 000440 017700 000000 031760
00060: 004142 014440 017470 031760 000000 043400 000440 017700
00070: 031760 000050 000000 014440 000000 000000 000000 000000
00100: SAME: TO 000200-1


*T RECORD 2321 (%4421, #911)
00000: 036000 060156 010555 000772 000000 017470 031760 000322
00010: 000440 017700 000000 031760 002041 014440 017470 031460
00020: 000000 000000 014040 017560 031760 000304 000000 000440
00030: 017700 101760 146307 000440 000000 017340 031460 000000
00040: 014040 017460 000000 031460 000000 000040 017140 031460
00050: 000000 000000 014040 017560 031460 000000 000000 000040
00060: 017140 011662 034001 033164 000000 031460 000000 014040
00070: 017560 031460 000000 000000 000000 000000 000000 000000
00100: SAME: TO 000200-1


*T RECORD 2322 (%4422, #912)
00000: 036000 060156 151264 001050 000000 000040 017140 031460
00010: 000000 014040 000000 017560 031760 001022 000440 017700
00020: 000000 031760 000041 014440 017470 031460 000000 000000
00030: 014040 017560 031760 001004 000000 000440 017700 101760
00040: 146307 000440 000000 017340 031460 000000 014040 017460
00050: 000000 031460 000000 000040 017140 037760 000000 000000
```

```
00060: 014506 017562 031460 000000 000000 000040 017140 031460
00070: 000000 014040 000000 017560 000000 000000 000000 000000
00100: SAME: TO 000200-1


*T RECORD 2323 (%4423, #913)
00000: 036000 060156 030710 001126 000000 031460 000000 000040
00010: 017140 113062 000000 034001 033202 031460 000000 014040
00020: 000000 017560 031760 000332 000440 017760 000000 031760
00030: 001032 000440 017760 031760 000000 041401 000440 017700
00040: 041260 000000 000000 014440 017470 031760 040000 000440
00050: 000000 017700 033760 177776 000445 017000 000000 003565
00060: 000002 000445 017000 001565 000000 146316 000440 017340
00070: 031460 000000 000000 014040 000000 000000 000000 000000
00100: SAME: TO 000200-1


*T RECORD 2324 (%4424, #914)
00000: 021000 060131 057047 001204 000000 017460 031460 000000
00010: 000040 017140 000000 031460 000000 014040 017460 121165
00020: 000000 000000 000446 017000 033211 033220 000000 020040
00030: 001000 155525 002001 033220 000000 031460 000000 000040
00040: 007000 073740 000000 000000 000000 000000 000000 000000
00050: SAME: TO 000200-1


*T RECORD 2325 (%4425, #915)
00000: 002000 120000 120000 000000 000000 000000 000000 000000
00010: SAME: TO 000200-1


*T RECORD 2326 (%4426, #916)
00000: 025000 020000 123530 077126 042503 052040 004635 000000
00010: SAME: TO 000020-1
00020: 000000 042570 062543 020116 067556 026503 066151 070160
00030: 062544 020166 062543 072157 071040 023040 031544 020166
00040: 062543 072157 071054 040504 040515 036071 030060 033462
00050: 031056 030461 000000 000000 000000 000000 000000 000000
00060: SAME: TO 000200-1


*T RECORD 2327 (%4427, #917)
00000: 003400 040001 053632 077126 042503 052000 000000 000000
00010: SAME: TO 000200-1


*T RECORD 2328 (%4430, #918)
00000: 036000 060156 037612 000000 000000 004634 000400 146307
00010: 064232 032541 000000 034001 032766 031460 000000 000100
00020: 000000 015000 030760 100000 000440 017000 000000 031460
00030: 033674 000040 006000 031460 000000 000000 000040 011000
00040: 030760 000000 000000 000400 017000 047660 001740 000441
00050: 000000 017000 001561 000022 000440 017700 000000 041570
00060: 000020 002440 017036 030760 000000 000000 000500 017000
00070: 061660 002041 000000 014440 000000 000000 000000 000000
00100: SAME: TO 000200-1


*T RECORD 2329 (%4431, #919)
00000: 036000 060156 040134 000056 000000 017470 030760 004160
00010: 014440 017560 000000 031460 033005 154040 005000 031760
00020: 000000 001022 000440 017700 031760 000041 000000 014440
00030: 017470 151205 034001 033004 000000 031460 000000 014040
00040: 017560 041561 000000 003400 002440 017034 001740 000000
00050: 000000 123440 017307 031460 033015 120040 000000 005000
```

```
00060: 030760 004140 000440 017000 000000 061561 000300 001440
00070: 017037 031760 000000 033015 000000 000000 000000 000000
00100: SAME: TO 000200-1


*T RECORD 2330 (%4432, #91A)
00000: 036000 060156 105521 000134 000000 022500 005036 101760
00010: 033015 017520 000000 005307 030760 004020 000440 017000
00020: 000000 041570 000020 000440 017000 031460 000000 033024
00030: 020040 005000 031760 010040 000000 000440 017030 031760
00040: 043001 014440 000000 017760 031760 000040 000440 017030
00050: 000000 000241 034001 033022 031760 043400 000000 014440
00060: 017760 031460 033034 000040 000000 016000 061660 000000
00070: 000500 017030 000000 031460 000000 000000 000000 000000
00100: SAME: TO 000200-1


*T RECORD 2331 (%4433, #91B)
00000: 036000 060156 116623 000212 000000 033027 154040 005000
00010: 031760 004142 000000 000440 017030 031760 043001 014440
00020: 000000 017760 031760 000000 000520 017030 000000 031460
00030: 033033 154040 005000 031760 000000 000050 000440 017030
00040: 031760 043400 000000 014440 017760 041260 000000 000440
00050: 000000 017030 031760 041401 014440 017760 000000 001561
00060: 000033 000440 017760 030760 000000 000000 000400 017030
00070: 075030 034001 000000 033040 000000 000000 000000 000000
00100: SAME: TO 000200-1


*T RECORD 2332 (%4434, #91C)
00000: 036000 060156 021030 000270 000000 047660 074000 000045
00010: 017000 041660 000000 000036 001040 017305 033760 000000
00020: 000000 000126 017000 041570 000020 000440 000000 017000
00030: 031460 000000 020040 007000 000000 041570 000200 000440
00040: 017000 003565 000000 001000 000445 017000 003566 001000
00050: 000000 000446 017000 031760 000000 000500 000000 007000
00060: 001565 000777 000040 017030 000000 001561 000014 014040
00070: 017760 001566 000000 000777 000000 000000 000000 000000
00100: SAME: TO 000200-1


*T RECORD 2333 (%4435, #91D)
00000: 036000 060156 007103 000346 000000 000040 017030 001561
00010: 000056 014040 000000 017760 031464 000000 000440 017700
00020: 000000 122415 020001 033056 043564 000377 000000 002444
00030: 017034 001564 000000 000500 000000 017030 033760 000000
00040: 000544 017000 000000 031760 040001 000440 017700 061561
00050: 000000 000300 014440 017460 031460 000000 000000 120040
00060: 007000 031760 040000 014440 000000 017760 031460 000000
00070: 000040 007000 000000 016363 000000 000000 000000 000000
00100: SAME: TO 000200-1


*T RECORD 2334 (%4436, #91E)
00000: 036000 060156 174416 000424 000000 034001 033066 031460
00010: 033071 000040 000000 006000 031460 033710 000040 006000
00020: 000000 031460 000000 000040 007000 043570 000000 000040
00030: 000451 017000 031461 032766 000000 000440 006030 031471
00040: 000000 000440 000000 017000 031460 033241 120040 005000
00050: 000000 031460 033051 000040 006000 041570 000000 000016
00060: 000440 017305 033472 000000 000000 000531 015030 030473
00070: 033120 014440 000000 005700 000000 000000 000000 000000
00100: SAME: TO 000200-1
```

```
*T RECORD 2335 (%4437, #91F)
00000: 036000 060156 035546 000502 000000 121172 033140 014453
00010: 005000 003172 000000 000000 000052 011000 003173 033112
00020: 000000 014053 005000 151444 034001 033104 000000 120173
00030: 033235 000451 006000 121562 000000 000000 000520 017000
00040: 033200 033200 000000 120040 002000 000073 033105 014440
00050: 000000 005100 103463 000000 000443 017000 000000 110072
00060: 033105 000440 016000 120072 000000 033237 000440 006000
00070: 121563 000000 000000 000520 000000 000000 000000 000000
00100: SAME: TO 000200-1

*T RECORD 2336 (%4440, #920)
00000: 036000 060156 137770 000560 000000 017000 033216 033216
00010: 120040 002000 000000 000072 033113 014440 005100 103462
00020: 000000 000000 000442 017000 110073 033113 000000 000440
00030: 016000 123472 000000 000052 000000 017000 121172 033160
00040: 014453 005000 000000 027614 034001 033122 003172 000000
00050: 000000 000052 011000 003173 033132 014053 000000 005000
00060: 000173 033235 000451 006000 000000 121562 000000 000520
00070: 017000 033200 000000 033200 000000 000000 000000 000000
00100: SAME: TO 000200-1

*T RECORD 2337 (%4441, #921)
00000: 036000 060156 141336 000636 000000 120040 002000 000073
00010: 033125 014440 000000 005200 103463 000000 000443 017000
00020: 000000 110072 033125 000440 016000 120072 000000 033237
00030: 000440 006000 121563 000000 000000 000520 017000 033216
00040: 033216 120040 000000 002000 000072 033133 014440 005100
00050: 000000 013462 000000 000442 017000 110073 000000 033133
00060: 000440 016000 153105 034001 000000 033140 123473 000000
00070: 000053 017000 000000 121172 000000 000000 000000 000000
00100: SAME: TO 000200-1

*T RECORD 2338 (%4442, #922)
00000: 036000 060156 034511 000714 000000 000000 000453 017000
00010: 003172 000000 000000 000052 011000 003173 033152 014053
00020: 000000 005000 120173 033235 000451 006000 000000 121562
00030: 000000 000520 017000 033200 000000 033200 120040 002000
00040: 000073 033145 000000 014440 005100 013463 000000 000443
00050: 000000 017000 110072 033145 000440 016000 000000 000072
00060: 033237 000440 006000 121563 000000 000000 000520 017000
00070: 033216 033216 000000 120040 000000 000000 000000 000000
00100: SAME: TO 000200-1

*T RECORD 2339 (%4443, #923)
00000: 036000 060156 155154 000772 000000 002000 000072 033153
00010: 014440 005200 000000 151624 034001 033156 103462 000000
00020: 000000 000442 017000 110073 033153 000440 000000 016000
00030: 123473 000000 000053 017000 000000 121172 000000 000453
00040: 017000 003172 000000 000000 000052 011000 003173 033172
00050: 000000 014053 005000 000173 033235 000451 000000 006000
00060: 121562 000000 000520 017000 000000 033200 033200 120040
00070: 002000 000073 000000 033165 000000 000000 000000 000000
00100: SAME: TO 000200-1

*T RECORD 2340 (%4444, #924)
00000: 036000 060156 124125 001050 000000 014440 005200 013463
```
484

```
00010: 000000 000443 000000 017000 110072 033165 000440 016000
00020: 000000 000072 033237 000440 006000 121563 000000 000000
00030: 000520 017000 051253 034001 000000 033174 033216 033216
00040: 120040 002000 000000 000072 033173 014440 005200 013462
00050: 000000 000000 000442 017000 110073 033173 000000 000440
00060: 016000 033760 000000 000531 000000 017000 041571 177000
00070: 000440 017000 000000 001171 000000 000000 000000 000000
00100: SAME: TO 000200-1


*T RECORD 2341 (%4445, #925)
00000: 036000 060156 144352 001126 000000 033234 120446 005030
00010: 001561 000014 000000 014440 017760 113563 000000 000411
00020: 000000 017000 041571 177000 000440 017000 000000 001171
00030: 033210 120045 005030 001561 000000 000056 014040 017760
00040: 113163 000000 000000 000451 017000 101571 033215 014400
00050: 000000 005030 056665 034001 033212 063570 000000 000000
00060: 000510 017000 041570 000017 000000 000440 017000 063570
00070: 033234 020510 000000 005000 000000 000000 000000 000000
00100: SAME: TO 000200-1


*T RECORD 2342 (%4446, #926)
00000: 036000 060156 075662 001204 000000 103163 033205 000451
00010: 016000 033760 000000 000000 000531 017000 041571 177000
00020: 000000 000440 017000 001171 033234 120445 000000 005030
00030: 001561 000016 014440 017760 000000 113562 000000 000411
00040: 017000 041571 000000 177000 000440 017000 001171 033226
00050: 000000 120046 005030 001561 000054 014040 000000 017760
00060: 113162 000000 000451 017000 000000 101571 033233 014400
00070: 005030 062406 000000 034001 000000 000000 000000 000000
00100: SAME: TO 000200-1


*T RECORD 2343 (%4447, #927)
00000: 036000 060156 057434 001262 000000 033230 063570 000000
00010: 000510 017000 000000 041570 000017 000440 017000 063570
00020: 000000 033234 020510 005000 103162 033223 000000 000451
00030: 016000 031260 000000 000440 000000 007000 031462 000000
00040: 000440 017300 000000 003171 000000 000442 007000 031463
00050: 000000 000000 000440 017300 003563 000000 000000 000543
00060: 007000 031460 033651 000040 000000 006000 043564 177400
00070: 000444 017000 000000 043574 000000 000000 000000 000000
00100: SAME: TO 000200-1


*T RECORD 2344 (%4450, #928)
00000: 036000 060156 147447 001340 000000 177400 000454 017000
00010: 031464 000000 000000 002440 017034 033760 000000 000515
00020: 000000 017000 143725 034001 033246 031474 000000 000000
00030: 002440 017034 123575 000000 000000 000514 017000 041570
00040: 002000 000440 000000 017000 031460 033270 020040 005000
00050: 000000 031474 000000 000440 017000 031460 000000 033262
00060: 014040 005000 031474 000000 000000 000440 017030 031760
00070: 146321 000440 000000 017360 000000 000000 000000 000000
00100: SAME: TO 000200-1


*T RECORD 2345 (%4451, #929)
00000: 036000 060156 043107 001416 000000 031760 146322 000440
00010: 017360 031475 000000 000000 000440 017030 031760 146317
00020: 000000 000440 017360 031460 033267 000040 000000 016000
00030: 031760 146317 000440 017360 000000 033760 000000 000515
```

```
00040: 017000 031123 000000 034001 033264 121474 000000 000440
00050: 000000 017030 031760 146321 000440 017360 000000 031760
00060: 146322 000440 017360 031460 000000 033763 000040 006000
00070: 031460 000000 000000 000420 000000 000000 000000 000000
00100: SAME: TO 000200-1


*T RECORD 2346 (%4452, #92A)
00000: 036000 060156 120764 001474 000000 015030 031461 000000
00010: 000500 015030 000000 031462 000000 000500 015030 031460
00020: 000000 000000 000100 015000 043260 000000 000000 000440
00030: 017000 033472 000000 000455 000000 017000 031460 033300
00040: 114040 005000 000000 123475 000000 000455 017000 033473
00050: 000000 000000 000456 017000 031460 033303 000000 114040
00060: 005000 156026 034001 033302 000000 123476 000000 000456
00070: 017000 033475 000000 000000 000000 000000 000000 000000
00100: SAME: TO 000200-1


*T RECORD 2347 (%4453, #92B)
00000: 036000 060156 011426 001552 000000 000441 017000 121175
00010: 000000 000456 000000 017000 031460 033307 114040 005000
00020: 000000 033476 000000 000441 017000 031474 000000 000000
00030: 002440 017035 031460 033312 000000 114040 005000 111760
00040: 000000 000500 000000 017030 030760 177600 000440 017000
00050: 000000 040660 000000 000500 017000 031460 000000 003325
00060: 000040 006000 031474 000000 000000 000440 017000 031460
00070: 033320 114040 000000 005000 000000 000000 000000 000000
00100: SAME: TO 000200-1


*T RECORD 2348 (%4454, #92C)
00000: 036000 060156 043574 001630 000000 123461 000000 000441
00010: 017000 124773 000000 034001 033320 031461 000000 003440
00020: 000000 017037 031760 146313 000440 017360 000000 031460
00030: 000000 000040 011000 033760 000000 000000 000402 011000
00040: 033760 000000 000000 000401 011000 033760 000000 000400
00050: 000000 011000 031760 000000 003400 017010 000000 031472
00060: 000000 000440 017000 033472 000000 033332 114455 005000
00070: 123472 000000 000000 000455 000000 000000 000000 000000
00100: SAME: TO 000200-1


*T RECORD 2349 (%4455, #92D)
00000: 036000 060156 106057 001706 000000 017000 031473 000000
00010: 000440 017000 000000 033473 033335 114456 005000 123473
00020: 000000 000000 000456 017000 031760 146311 000000 000440
00030: 017300 121713 034001 033336 000000 031475 000000 000440
00040: 017070 033570 000000 040000 000450 017000 031476 000000
00050: 000000 000440 017170 121175 000000 000456 000000 017000
00060: 031476 033401 014440 005030 000000 031760 146311 000440
00070: 017360 031760 000000 146310 000000 000000 000000 000000
00100: SAME: TO 000200-1


*T RECORD 2350 (%4456, #92E)
00000: 036000 060156 160000 001764 000000 000440 017300 031475
00010: 000000 000440 000000 017070 053570 040000 000450 017000
00020: 000000 031760 146310 000440 017340 033760 000000 000000
00030: 000515 017000 031472 000000 000000 000440 017000 005150
00040: 000000 014450 000000 017000 031473 033355 144440 005000
00050: 000000 052710 034001 033354 111760 000000 000000 000100
00060: 017030 003562 000000 000112 000000 017000 031760 146311
```

```
00070: 015440 017340 000000 030760 000000 000000 000000 000000
00100: SAME: TO 000200-1


*T RECORD 2351 (%4457, #92F)
00000: 036000 060156 107366 002042 000000 000000 000500 017000
00010: 003660 000000 000000 000516 017030 123575 000000 000513
00020: 000000 017000 003175 000000 000455 017000 000000 121172
00030: 000000 000442 017000 033533 000000 033436 120040 002000
00040: 031473 000000 000000 000440 017000 031460 033372 014040
00050: 000000 005000 113175 033371 050453 005000 000000 103463
00060: 033372 000443 016000 013463 000000 000000 000443 017000
00070: 115602 034001 000000 033372 000000 000000 000000 000000
00100: SAME: TO 000200-1


*T RECORD 2352 (%4460, #930)
00000: 036000 060156 161656 002120 000000 031760 146313 000440
00010: 017340 003176 000000 000000 000453 017000 003564 000000
00020: 000000 000504 017000 031470 000000 000440 000000 017000
00030: 031460 033400 014040 005000 000000 103462 033363 000442
00040: 016000 013462 000000 033363 000442 016000 031760 146310
00050: 000000 000440 017360 031760 146311 000440 000000 017300
00060: 031475 000000 000440 017070 000000 031760 146310 000440
00070: 017340 033760 000000 000000 000000 000000 000000 000000
00100: SAME: TO 000200-1


*T RECORD 2353 (%4461, #931)
00000: 036000 060156 043643 002176 000000 000515 017000 031473
00010: 000000 000440 000000 017000 005150 000000 014450 017000
00020: 000000 064442 034001 033410 031472 033412 000000 144440
00030: 005000 111760 000000 000100 000000 017030 003563 000000
00040: 000112 017000 000000 031760 146311 015440 017340 030760
00050: 000000 000000 000500 017000 003660 000000 000000 000516
00060: 017030 123575 000000 000513 000000 017000 003175 000000
00070: 000455 017000 000000 121172 000000 000000 000000 000000
00100: SAME: TO 000200-1


*T RECORD 2354 (%4462, #932)
00000: 036000 060156 100643 002254 000000 000000 000443 017000
00010: 033533 033436 000000 120040 002000 031473 000000 000440
00020: 000000 017000 031460 033427 014040 005000 000000 113175
00030: 033426 050453 005000 103462 000000 033427 000442 016000
00040: 121403 034001 000000 033426 013462 000000 000442 017000
00050: 000000 003176 000000 000453 017000 031760 000000 146313
00060: 000440 017340 003564 000000 000000 000504 017000 031470
00070: 000000 000440 000000 017000 000000 000000 000000 000000
00100: SAME: TO 000200-1


*T RECORD 2355 (%4463, #933)
00000: 036000 060156 150721 002332 000000 031460 033435 014040
00010: 005000 103463 000000 033420 000443 016000 013463 033420
00020: 000000 000443 016000 041564 177400 002440 000000 017034
00030: 041570 000220 000440 017000 000000 031460 033446 120040
00040: 005000 041570 000000 002000 000440 017000 031460 033445
00050: 000000 020040 005000 031460 033714 000040 000000 006000
00060: 047616 034001 033444 031460 000000 033446 000040 016000
00070: 001560 000000 000000 000500 000000 000000 000000 000000
00100: SAME: TO 000200-1
```

```
*T RECORD 2356 (%4464, #934)
00000: 036000 060156 052222 002410 000000 017340 033760 000000
00010: 000517 017000 000000 001170 000000 000450 017000 041570
00020: 000000 000016 000040 017305 043570 000017 000000 000051
00030: 017000 031460 033501 114040 000000 005000 041563 177000
00040: 000440 017000 000000 110562 000000 120520 007000 001165
00050: 000000 000000 000443 017030 001561 000016 000000 014440
00060: 017760 031460 033462 154040 000000 005000 001563 160000
00070: 000440 017030 000000 031760 000000 000000 000000 000000
00100: SAME: TO 000200-1

*T RECORD 2357 (%4465, #935)
00000: 036000 060156 032255 002466 000000 001016 014440 017760
00010: 166204 034001 000000 033462 041660 177000 000440 017000
00020: 000000 031460 000000 120040 007000 041570 000000 000020
00030: 000440 017000 031460 033543 000000 020040 006000 031460
00040: 033471 154040 000000 005000 001660 160000 000440 017030
00050: 000000 031760 001054 014440 017760 001066 000000 033531
00060: 054440 006030 001561 000054 000000 014440 017760 041570
00070: 000020 000440 000000 017000 000000 000000 000000 000000
00100: SAME: TO 000200-1

*T RECORD 2358 (%4466, #936)
00000: 036000 060156 033170 002544 000000 031460 033536 120040
00010: 006000 031460 000000 033531 000040 006000 013471 000000
00020: 000000 000451 017000 100260 033462 120440 000000 005000
00030: 113041 034001 033500 031460 000000 000000 000040 007000
00040: 041562 177000 000000 000440 017000 110563 000000 120520
00050: 000000 007000 031460 033506 154040 005000 000000 001562
00060: 160000 000440 017030 031760 000000 001014 014440 017760
00070: 001166 000000 000000 000442 000000 000000 000000 000000
00100: SAME: TO 000200-1

*T RECORD 2359 (%4467, #937)
00000: 036000 060156 005217 002622 000000 017030 001561 000014
00010: 014440 017760 000000 041660 177000 000440 017000 031460
00020: 000000 000000 120040 007000 041570 000020 000000 000440
00030: 017000 031460 033543 020040 000000 006000 031460 033517
00040: 154040 005000 000000 001660 160000 000440 017030 140560
00050: 000000 034001 033516 031760 001056 014440 000000 017760
00060: 001065 033527 054440 006030 000000 001561 000056 014440
00070: 017760 041570 000000 000020 000000 000000 000000 000000
00100: SAME: TO 000200-1

*T RECORD 2360 (%4470, #938)
00000: 036000 060156 103000 002700 000000 000440 017000 031460
00010: 033536 120040 000000 006000 031460 033527 000040 006000
00020: 000000 013471 000000 000451 017000 100260 000000 033510
00030: 120440 005000 031460 000000 000000 000040 007000 031760
00040: 000316 014440 000000 017760 031460 000000 000040 007000
00050: 000000 031760 000314 014440 017760 031460 000000 000000
00060: 000040 007000 031460 033436 000000 000040 006000 020536
00070: 034001 033534 000000 031460 000000 000000 000000 000000
00100: SAME: TO 000200-1

*T RECORD 2361 (%4471, #939)
00000: 036000 060156 011523 002756 000000 033662 000040 006000
00010: 031460 000000 000000 000040 007000 031760 040000 014440
```

```
00020: 000000 017740 031460 000000 000440 017360 000000 103460
00030: 000000 014440 017440 103460 000000 000000 000440 017160
00040: 031460 000000 000000 000040 007000 041570 000200 000440
00050: 000000 017000 031460 033554 020040 005000 000000 031760
00060: 040001 000440 017700 031460 000000 000000 000440 017340
00070: 103460 000000 000000 014440 000000 000000 000000 000000
00100: SAME: TO 000200-1
```

*T RECORD 2362 (%4472, #93A)
```
00000: 036000 060156 030211 003034 000000 017460 031460 000000
00010: 000040 017140 000000 031760 040000 000440 017700 016463
00020: 000000 034001 033552 103460 000000 014440 000000 017460
00030: 031460 000000 000040 007000 000000 031260 000000 000440
00040: 017030 031477 000000 000000 000500 015030 031460 000000
00050: 000000 000100 015000 041570 001000 000440 000000 017000
00060: 031460 033605 120040 006000 000000 041570 000100 000440
00070: 017000 031460 000000 033575 000000 000000 000000 000000
00100: SAME: TO 000200-1
```

*T RECORD 2363 (%4473, #93B)
```
00000: 036000 060156 134532 003112 000000 020040 005000 031467
00010: 000000 000440 000000 017340 003567 000002 000447 017000
00020: 000000 041570 000400 000440 017000 031460 000000 033572
00030: 020040 005000 030760 177400 000000 000440 017000 055604
00040: 034001 033570 000000 041660 000000 002500 017034 031460
00050: 000000 033574 000040 016000 030760 000377 000000 000440
00060: 017000 041660 000000 000500 000000 017030 113577 000000
00070: 000517 017000 000000 040577 000000 000000 000000 000000
00100: SAME: TO 000200-1
```

*T RECORD 2364 (%4474, #93C)
```
00000: 036000 060156 154766 003170 000000 000377 002440 017034
00010: 031660 000000 000000 000500 017030 031760 040001 014440
00020: 000000 017760 031760 040000 014440 017760 000000 031460
00030: 000000 000040 011000 033760 000000 000000 000417 011000
00040: 030760 000000 000000 000400 017000 031460 000000 000040
00050: 000000 007000 031471 000000 000440 017700 000000 015240
00060: 034001 033606 031467 000000 000000 000440 017030 031466
00070: 000000 000500 000000 015030 000000 000000 000000 000000
00100: SAME: TO 000200-1
```

*T RECORD 2365 (%4475, #93D)
```
00000: 036000 060156 065255 003246 000000 043260 000000 000511
00010: 015000 031760 000000 146316 000440 017340 033760 000000
00020: 000000 000507 017000 031760 153023 000440 000000 017340
00030: 003567 000000 000506 017000 000000 121177 000000 000446
00040: 017000 031460 000000 033620 114040 005000 113577 033625
00050: 000000 000507 016000 000177 000000 000447 000000 017000
00060: 010260 000000 000440 017000 000000 041660 000400 000440
00070: 017000 031460 000000 033625 000000 000000 000000 000000
00100: SAME: TO 000200-1
```

*T RECORD 2366 (%4476, #93E)
```
00000: 036000 060156 133041 003324 000000 020040 005000 003074
00010: 034001 033624 000000 123577 000400 000447 017000 033467
00020: 000000 000000 000446 017000 031460 033635 000000 020040
00030: 005000 103760 000000 000447 000000 017000 035466 033641
00040: 000446 006003 000000 037467 033630 120447 005002 035467
```

```
00050: 000000 000000 000447 017003 003171 000000 000000 000457
00060: 017000 113167 000000 000457 000000 017000 031460 000000
00070: 000040 011000 000000 033760 000000 000000 000000 000000
00100: SAME: TO 000200-1


*T RECORD 2367 (%4477, #93F)
00000: 036000 060156 116167 003402 000000 000000 000406 011000
00010: 033760 000000 000000 000407 017000 033760 000000 000551
00020: 000000 007000 031760 146314 000440 017340 000000 134224
00030: 034001 033642 031760 000000 000000 003500 017037 030760
00040: 033646 114500 000000 005000 040660 177776 000440 017000
00050: 000000 061660 132331 000440 017030 031760 000000 000000
00060: 000500 017060 037451 000000 000000 044451 017002 031466
00070: 000000 000440 000000 007000 000000 000000 000000 000000
00100: SAME: TO 000200-1


*T RECORD 2368 (%4500, #940)
00000: 036000 060156 124052 003460 000000 031467 000000 000420
00010: 015030 031470 000000 000000 000500 015030 031474 000000
00020: 000000 000500 015030 031475 000000 000500 000000 015030
00030: 031476 000000 000500 015030 000000 031477 000000 000500
00040: 015030 031460 000000 000000 000100 015000 113425 030001
00050: 000000 033660 031460 000000 000040 010000 000000 031460
00060: 007770 000040 007000 031460 000000 000000 000040 011000
00070: 031460 007771 000000 000000 000000 000000 000000 000000
00100: SAME: TO 000200-1


*T RECORD 2369 (%4501, #941)
00000: 036000 060156 065162 003536 000000 014000 031460 000000
00010: 000040 011000 000000 033760 000000 000417 011000 033760
00020: 000000 000000 000416 011000 033760 000000 000000 000415
00030: 011000 033760 000000 000414 000000 011000 033760 000000
00040: 000410 011000 000000 033760 000000 000407 011000 031760
00050: 000000 000000 003400 007010 136356 034001 000000 033674
00060: 041260 033676 000440 016000 000000 101760 000000 000440
00070: 017000 031460 000000 000000 000000 000000 000000 000000
00100: SAME: TO 000200-1


*T RECORD 2370 (%4502, #942)
00000: 036000 060156 050101 003614 000000 000040 037170 031460
00010: 000000 000040 000000 017000 031460 000000 000040 037150
00020: 000000 031760 000076 000040 017340 031760 000000 033706
00030: 020500 005000 031460 033675 000000 120040 005000 031460
00040: 000000 000240 000000 017000 031460 000000 000040 027170
00050: 000000 031460 033674 120040 005000 001660 000000 033704
00060: 000500 016070 031460 000000 000000 000040 037150 031760
00070: 000076 000440 000000 017340 000000 000000 000000 000000
00100: SAME: TO 000200-1


*T RECORD 2371 (%4503, #943)
00000: 036000 060156 153006 003672 000000 106721 034001 033712
00010: 031760 000000 000000 003500 017037 021740 033704 114500
00020: 000000 016075 033760 000000 000517 017000 000000 031760
00030: 146317 000440 017340 111577 000000 000000 002500 017034
00040: 033760 000000 000000 000517 017000 031460 000000 000420
00050: 000000 015030 031461 000000 000500 015030 000000 031462
00060: 000000 000500 015030 043260 000000 000000 000500 015000
00070: 030477 000000 000000 000440 000000 000000 000000 000000
```

```
00100: SAME: TO 000200-1

*T RECORD 2372 (%4504, #944)
00000: 036000 060156 166033 003750 000000 017000 031760 146321
00010: 000440 017340 000000 033760 000000 000511 017000 033760
00020: 000000 003325 000501 006000 105014 034001 000000 033730
00030: 041561 177400 000440 017000 000000 031460 033733 020040
00040: 005000 033760 000000 000377 000441 017000 030461 000000
00050: 000000 000440 011000 033760 000000 000402 000000 011000
00060: 033760 000000 000401 011000 000000 033760 000000 000400
00070: 011000 031760 000000 000000 000000 000000 000000 000000
00100: SAME: TO 000200-1

*T RECORD 2373 (%4505, #945)
00000: 036000 060156 034426 004026 000000 003400 017010 001060
00010: 000000 000440 000000 017340 030760 000000 000500 017000
00020: 000000 031760 153023 000440 017340 110660 000000 000000
00030: 000500 017000 031460 000000 000000 000440 017030 031461
00040: 000000 000500 000000 015030 172004 034001 033746 031460
00050: 000000 000000 000100 015000 031760 146322 000000 000440
00060: 017340 033760 003435 000500 000000 006000 041660 177400
00070: 002440 017034 000000 033760 000000 000000 000000 000000
00100: SAME: TO 000200-1

*T RECORD 2374 (%4506, #946)
00000: 036000 060156 000325 004104 000000 000000 000517 017000
00010: 031460 000000 000000 000040 011000 033760 000000 000401
00020: 000000 011000 033760 000000 000400 017000 000000 031760
00030: 146320 000440 017340 000577 000000 000000 000500 017000
00040: 031760 153023 000000 000440 017340 001660 000000 000500
00050: 000000 017030 031460 000000 000040 007000 000000 031460
00060: 000000 000420 015030 132363 000000 034001 033764 031461
00070: 000000 000500 000000 015030 000000 000000 000000 000000
00100: SAME: TO 000200-1

*T RECORD 2375 (%4507, #947)
00000: 036000 060156 151207 004162 000000 031460 000000 000100
00010: 015000 031760 000000 152475 000440 017300 041565 100000
00020: 000000 000440 017000 031460 033776 020040 000000 005000
00030: 041565 040000 000440 017100 000000 031460 033776 020040
00040: 005000 041565 000000 020000 000440 017100 031460 033776
00050: 000000 020040 005000 031460 000000 000040 000000 017100
00060: 033760 000377 000440 017040 000000 111560 000000 000500
00070: 017000 113175 000000 034025 000000 000000 000000 000000
00100: SAME: TO 000200-1

*T RECORD 2376 (%4510, #948)
00000: 036000 060156 150632 004240 000000 020440 005000 031760
00010: 000000 000500 000000 017000 067164 034001 034002 123575
00020: 000000 000377 015455 017000 031460 034045 000000 000040
00030: 006000 030475 034006 150440 000000 005000 111760 000000
00040: 000500 017030 000000 033760 000377 000456 017000 113576
00050: 000000 003435 000500 006000 121176 000000 000000 003455
00060: 017034 033760 000000 000501 000000 017000 041660 177760
00070: 001440 017034 000000 031460 000000 000000 000000 000000
00100: SAME: TO 000200-1

*T RECORD 2377 (%4511, #949)
```

```
00000: 036000 060156 111634 004316 000000 034015 050040 005000
00010: 113561 034016 000000 000517 016000 003561 000000 000517
00020: 000000 017000 031460 034020 114040 005000 000000 033476
00030: 034025 000440 016000 101525 000000 034001 034020 041577
00040: 170000 000440 000000 017000 031460 034023 020040 005000
00050: 000000 043260 034025 000440 016000 041577 000000 177760
00060: 001440 017034 113576 000000 000000 000500 017000 033760
00070: 000377 000455 000000 017000 000000 000000 000000 000000
00100: SAME: TO 000200-1

*T RECORD 2378 (%4512, #94A)
00000: 036000 060156 112353 004374 000000 031760 153023 000440
00010: 017340 031760 000000 000000 000500 017000 031460 034033
00020: 000000 120040 005000 031760 146320 000440 000000 017300
00030: 121175 034040 000440 016070 000000 030760 000400 000440
00040: 017000 123175 000000 000000 000440 017000 110660 003435
00050: 000000 000500 006000 114151 034001 034036 000000 041660
00060: 177400 002440 017034 031760 000000 146320 000440 017360
00070: 031460 000000 000000 000040 000000 000000 000000 000000
00100: SAME: TO 000200-1

*T RECORD 2379 (%4513, #94B)
00000: 036000 060156 073610 004452 000000 011000 033760 000000
00010: 000401 011000 000000 033760 000000 000400 011000 031760
00020: 000000 000000 003400 017010 031460 000000 000000 000040
00030: 007000 033760 000377 000440 000000 017000 033760 034050
00040: 150517 005000 000000 111760 000000 000500 017030 113560
00050: 000000 000000 000500 017000 031760 146321 000000 000440
00060: 017340 033760 000000 000516 000000 017000 030760 003435
00070: 000500 006000 000000 000015 000000 000000 000000 000000
00100: SAME: TO 000200-1

*T RECORD 2380 (%4514, #94C)
00000: 036000 060156 037730 004530 000000 032001 034054 041660
00010: 177400 002440 000000 017304 031460 034063 050040 005000
00020: 000000 003576 000000 000521 017000 041561 000000 177400
00030: 000440 017000 031461 034062 000000 020440 005030 031760
00040: 000377 000440 000000 017030 031460 034066 000040 016000
00050: 000000 111576 000000 000520 017030 031460 000000 034066
00060: 114040 005000 041260 000000 000000 000440 017030 031760
00070: 146322 000440 000000 017360 000000 000000 000000 000000
00100: SAME: TO 000200-1

*T RECORD 2381 (%4515, #94D)
00000: 020000 060127 040736 004606 000000 031477 000000 000440
00010: 017030 031460 000000 000000 000040 007000 032730 005400
00020: 000000 146310 000000 000000 000000 000000 000000 132331
00030: 000010 000010 000000 000000 000000 000000 000000 100661
00040: 000000 000000 000000 000000 000000 000000 000000 000000
00050: SAME: TO 000200-1

*T RECORD 2382 (%4516, #94E)
00000: 002000 120000 120000 000000 000000 000000 000000 000000
00010: SAME: TO 000200-1

*T RECORD 2383 (%4517, #94F)
00000: 025000 020000 025606 077126 043501 046040 000516 000000
00010: SAME: TO 000020-1
```

```
00020: 000000 052122 040503 042440 053107 047124 026101 042101
00030: 046440 036071 030060 033462 031056 030461 032465 037040
00040: 020040 020040 020040 020040 020040 020040 020040 020040
00050: 020040 020040 000000 000000 000000 000000 000000 000000
00060: SAME: TO 000200-1

*T RECORD 2384 (%4520, #950)
00000: 003400 040001 050630 077126 043501 046000 000000 000000
00010: SAME: TO 000200-1

*T RECORD 2385 (%4521, #951)
00000: 036000 060156 077734 000000 000000 000515 034001 034071
00010: 113162 000000 000000 000452 017000 113163 000000 000453
00020: 000000 017000 031472 000000 000440 017000 000000 033472
00030: 034076 114455 005000 123472 000000 000000 000455 017000
00040: 031473 000000 000000 000440 017000 033473 034101 114456
00050: 000000 005000 123473 000000 000456 017000 000000 031760
00060: 146324 000440 017300 031475 000000 000000 000440 017070
00070: 033570 040000 000000 000450 000000 000000 000000 000000
00100: SAME: TO 000200-1

*T RECORD 2386 (%4522, #952)
00000: 036000 060156 054446 000056 000000 017000 031476 000000
00010: 000440 017170 000000 121175 000000 000456 017000 031476
00020: 000000 034143 014440 005030 123572 034001 000000 034107
00030: 031760 146324 000440 017360 000000 031760 146323 000440
00040: 017300 031475 000000 000000 000440 017070 053570 040000
00050: 000000 000450 017000 031760 146323 000440 000000 017340
00060: 033760 000000 000515 017000 000000 031472 000000 000440
00070: 017000 005150 000000 000000 000000 000000 000000 000000
00100: SAME: TO 000200-1

*T RECORD 2387 (%4523, #953)
00000: 036000 060156 020404 000134 000000 014450 017000 031473
00010: 034121 144440 000000 005000 111760 000000 000100 017030
00020: 000000 003562 000000 000112 017000 031760 000000 146324
00030: 015440 017340 030760 000000 000000 000500 017000 003660
00040: 000000 000516 000000 017030 054227 034001 034125 123575
00050: 000000 000000 000513 017000 003175 000000 000000 000455
00060: 017000 121172 000000 000442 000000 017000 034204 034176
00070: 120040 002000 000000 031473 000000 000000 000000 000000
00100: SAME: TO 000200-1

*T RECORD 2388 (%4524, #954)
00000: 036000 060156 111273 000212 000000 000000 000440 017000
00010: 031460 034136 000000 014040 005000 113175 034135 050453
00020: 000000 005000 103463 034136 000443 016000 000000 013463
00030: 000000 000443 017000 003176 000000 000000 000453 017000
00040: 031470 000000 000000 000440 017000 031460 034142 014040
00050: 000000 005000 103462 034127 000442 016000 000000 013462
00060: 034127 000442 016000 063646 000000 034001 034143 031760
00070: 146323 000440 000000 017360 000000 000000 000000 000000
00100: SAME: TO 000200-1

*T RECORD 2389 (%4525, #955)
00000: 036000 060156 105271 000270 000000 031760 146324 000440
00010: 017300 031475 000000 000000 000440 017070 031760 146323
00020: 000000 000440 017340 033760 000000 000515 000000 017000
```

```
00030: 031473 000000 000440 017000 000000 005150 000000 014450
00040: 017000 031472 000000 034154 144440 005000 111760 000000
00050: 000000 000100 017030 003563 000000 000112 000000 017000
00060: 031760 146324 015440 017340 000000 030760 000000 000500
00070: 017000 003660 000000 000000 000000 000000 000000 000000
00100: SAME: TO 000200-1


*T RECORD 2390 (%4526, #956)
00000: 036000 060156 111632 000346 000000 000516 017030 123575
00010: 000000 000513 000000 017000 064367 034001 034161 003175
00020: 000000 000000 000455 017000 121172 000000 000000 000443
00030: 017000 034204 034176 120040 000000 002000 031473 000000
00040: 000440 017000 000000 031460 034171 014040 005000 113175
00050: 000000 034170 050453 005000 103462 034171 000000 000442
00060: 016000 013462 000000 000442 000000 017000 003176 000000
00070: 000453 017000 000000 031470 000000 000000 000000 000000
00100: SAME: TO 000200-1


*T RECORD 2391 (%4527, #957)
00000: 036000 060156 066673 000424 000000 000000 000440 017000
00010: 031460 034175 000000 014040 005000 103463 034162 000443
00020: 000000 016000 013463 034162 000443 016000 000000 031460
00030: 025732 000040 006000 006307 000000 016001 034177 033462
00040: 000000 000441 000000 017000 033463 000000 000442 017000
00050: 000000 031460 034362 000040 006000 031460 000000 025763
00060: 000040 006000 031460 000000 000000 000040 007000 031460
00070: 034176 000040 000000 006000 000000 000000 000000 000000
00100: SAME: TO 000200-1


*T RECORD 2392 (%4530, #958)
00000: 011400 060114 001636 000502 000000 031460 000000 000040
00010: 007000 141432 000000 002000 146323 000000 000000 000000
00020: 000000 000000 146323 000000 000000 000000 000000 000000
00030: SAME: TO 000200-1


*T RECORD 2393 (%4531, #959)
00000: 002000 120000 120000 000000 000000 000000 000000 000000
00010: SAME: TO 000200-1


*T RECORD 2394 (%4532, #95A)
00000: 025000 020000 134051 077126 043516 052040 014201 000000
00010: SAME: TO 000020-1
00020: 000000 020111 046501 043505 051055 031040 050116 052040
00030: 053107 047124 026040 040504 040515 036071 030061 031060
00040: 031456 030462 031464 037040 020040 020040 020040 020040
00050: 020040 020040 000000 000000 000000 000000 000000 000000
00060: SAME: TO 000200-1


*T RECORD 2395 (%4533, #95B)
00000: 003400 040001 054645 077126 043516 052000 000000 000000
00010: SAME: TO 000200-1


*T RECORD 2396 (%4534, #95C)
00000: 036000 060156 165606 000000 000000 014200 023400 146327
00010: 177777 177777 000000 177777 177777 000000 000000 000000
00020: 000000 000000 000004 000010 000020 000000 000000 000000
00030: 000000 000000 000001 000043 000000 000000 000000 000000
00040: 000000 000000 000000 000000 070416 000000 000000 000000
```

```
00050: 000000 000000 000000 000000 000000 000000 000000 100017
00060: 000000 000001 000000 000001 000000 000000 000000 137062
00070: 001000 146464 000000 000000 000000 000000 000000 000000
00100: SAME: TO 000200-1


*T RECORD 2397 (%4535, #95D)
00000: 036000 060156 022020 000056 000000 000000 146464 000400
00010: 150466 000000 000000 150466 014400 152467 000000 000000
00020: 000000 000377 000377 000377 000377 000377 000000 000377
00030: 000377 000377 000000 000000 000000 000000 000377 000377
00040: 000377 000377 000000 000377 000377 000377 000377 000377
00050: 000000 000377 000377 000377 164443 034000 000000 152524
00060: 100001 000240 000564 000001 000000 000003 152764 000265
00070: 000564 000001 000000 000003 000000 000000 000000 000000
00100: SAME: TO 000200-1


*T RECORD 2398 (%4536, #95E)
00000: 036000 060156 035363 000134 000000 152746 000312 000564
00010: 000001 030003 000000 152520 000337 000564 000001 000003
00020: 000000 152750 000364 000564 000001 030003 000000 152521
00030: 000411 000564 000001 000003 000000 152752 000436 000564
00040: 000001 030003 000000 152522 000463 000564 000001 000003
00050: 000000 152754 000510 000564 000001 030003 000000 152523
00060: 177777 100001 000544 000564 000000 000001 000003 152756
00070: 000571 000564 000000 000001 000000 000000 000000 000000
00100: SAME: TO 000200-1


*T RECORD 2399 (%4537, #95F)
00000: 036000 060156 050213 000212 000000 004667 034000 152614
00010: 030003 153471 000000 000616 000564 000001 000003 152760
00020: 000000 000643 000564 000001 030002 146350 000000 000661
00030: 000564 000001 000003 152762 000000 000706 000564 000001
00040: 030001 153474 000000 177777 000000 177634 000144 000004
00050: 000000 000202 000447 152736 030004 000000 000000 152520
00060: 152643 152645 152740 030004 000000 000000 152521 152643
00070: 152645 152742 000000 030004 000000 000000 000000 000000
00100: SAME: TO 000200-1


*T RECORD 2400 (%4540, #960)
00000: 036000 060156 056176 000270 000000 000000 152522 152643
00010: 152645 152744 000000 030004 000000 152523 152643 152645
00020: 000000 177777 000004 000202 132576 034000 000000 152704
00030: 000447 152736 030004 022440 000000 152520 152644 152645
00040: 152740 030004 000000 022440 152521 152644 152645 152742
00050: 000000 030004 022440 152522 152644 152645 000000 152744
00060: 030004 022440 152523 152644 000000 152645 177777 020103
00070: 020040 020115 000000 020040 000000 000000 000000 000000
00100: SAME: TO 000200-1


*T RECORD 2401 (%4541, #961)
00000: 036000 060156 001030 000346 000000 020131 020040 020102
00010: 020040 020103 000000 036440 020115 036440 020131 036440
00020: 000000 020102 036440 020123 036440 020124 000000 036440
00030: 020120 036440 040504 045040 000000 000001 000076 000447
00040: 152774 030004 000000 177777 123736 014000 152774 040514
00050: 000000 046040 100003 000202 000231 000423 000000 000024
00060: 000000 000000 100003 000202 000000 000231 000423 000024
00070: 000377 000377 000000 152520 000000 000000 000000 000000
```

EP 0 455 351 A2

```
00100: SAME: TO 000200-1

*T RECORD 2402 (%4542, #962)
00000: 036000 060156 064324 000424 000000 152471 137413 152471
00010: 152520 135412 000000 000000 000000 034427 025400 153424
00020: 000000 035241 035244 035244 035244 035303 000000 035661
00030: 035300 035403 035403 035403 000000 035403 036467 035466
00040: 035720 035606 000000 035522 035561 036112 036115 036177
00050: 000000 036240 036561 035332 035306 035356 000000 035470
00060: 036467 036467 000000 035567 000000 000001 000012 153460
00070: 035614 000000 000000 000144 000000 000000 000000 000000
00100: SAME: TO 000200-1

*T RECORD 2403 (%4543, #963)
00000: 036000 060156 076143 000502 000000 153471 000144 000000
00010: 000000 000000 000000 000001 000000 100402 034001 034206
00020: 000000 031760 146344 000440 017340 031760 000000 000000
00030: 000500 017000 031460 034217 000000 020040 005000 041260
00040: 000000 000440 000000 017070 031760 146327 000440 017340
00050: 000000 031760 134722 000440 017360 031760 000000 146330
00060: 000440 017340 031760 134721 000000 000440 017360 031460
00070: 034437 000040 000000 016000 000000 000000 000000 000000
00100: SAME: TO 000200-1

*T RECORD 2404 (%4544, #964)
00000: 036000 060156 100003 000560 000000 031760 130502 000440
00010: 017340 031760 000000 000000 000500 017000 031460 034254
00020: 000000 020040 005000 031760 134716 000440 000000 017340
00030: 031760 000000 000500 017000 000000 154536 034001 034224
00040: 031460 034231 000000 144040 005000 031760 152467 000440
00050: 000000 017300 041260 000000 000440 017070 000000 031760
00060: 152470 000440 017360 031460 000000 034437 000040 016000
00070: 031760 152467 000000 000440 000000 000000 000000 000000
00100: SAME: TO 000200-1

*T RECORD 2405 (%4545, #965)
00000: 036000 060156 131355 000636 000000 017340 031760 000000
00010: 000500 017000 000000 031460 034241 120040 005000 031460
00020: 000000 036607 000040 006000 031760 152467 000000 000440
00030: 017300 101760 000000 000440 000000 017070 031760 152470
00040: 000440 017300 000000 041260 034437 000440 016070 031760
00050: 000000 152470 000440 017340 074770 034001 000000 034242
00060: 101760 000000 000500 017030 000000 033760 006000 000440
00070: 017000 121560 000000 000000 000000 000000 000000 000000
00100: SAME: TO 000200-1

*T RECORD 2406 (%4546, #966)
00000: 036000 060156 165526 000714 000000 000500 017000 031460
00010: 034250 120040 000000 005000 031460 036607 000040 006000
00020: 000000 041260 000000 000440 017030 031760 000000 152470
00030: 000440 017360 031760 152467 000000 000440 017300 101760
00040: 000000 000440 000000 017070 031460 034437 000040 016000
00050: 000000 101760 134722 000440 017340 033760 000000 000000
00060: 000501 017000 111561 000504 000000 000440 017000 031460
00070: 034267 014040 000000 005140 000000 000000 000000 000000
00100: SAME: TO 000200-1

*T RECORD 2407 (%4547, #967)
```

496

```
00000: 036000 060156 025373 000772 000000 065606 034001 034260
00010: 030760 000000 000000 000500 017000 111660 000034 000440
00020: 000000 017000 031460 034437 014040 005000 000000 111561
00030: 000561 000440 017000 031460 000000 034267 014040 005000
00040: 111660 000226 000000 000440 017000 031460 034437 014040
00050: 000000 005000 031760 134722 000440 017340 000000 033760
00060: 000000 000501 017000 041561 000000 001000 000440 017000
00070: 031460 034437 000000 120040 000000 000000 000000 000000
00100: SAME: TO 000200-1

*T RECORD 2408 (%4550, #968)
00000: 036000 060156 013200 001050 000000 005000 031760 134721
00010: 000440 017340 000000 033760 000000 000502 017000 041562
00020: 000000 001000 000440 017000 174221 034001 000000 034276
00030: 031460 034437 120040 005000 000000 031760 146343 000440
00040: 017340 031760 000000 000000 000500 017000 031460 034362
00050: 000000 020040 005000 031760 134716 000440 000000 017340
00060: 031760 000000 000500 017000 000000 031460 034362 044040
00070: 005000 033461 000000 000000 000000 000000 000000 000000
00100: SAME: TO 000200-1

*T RECORD 2409 (%4551, #969)
00000: 036000 060156 123752 001126 000000 000452 017000 033462
00010: 000000 000453 000000 017000 031760 146331 000440 017340
00020: 000000 033760 000000 000502 017000 031460 000000 000000
00030: 015040 017000 031472 000000 000000 000440 017070 031760
00040: 146332 000440 000000 017340 076001 034001 034314 033760
00050: 000000 000000 000503 017000 031473 034320 000000 150440
00060: 005070 031760 146345 000440 000000 017300 041260 034347
00070: 000440 016070 000000 031760 000000 000000 000000 000000
00100: SAME: TO 000200-1

*T RECORD 2410 (%4552, #96A)
00000: 036000 060156 057571 001204 000000 146327 000440 017300
00010: 031462 000000 000000 000440 017070 031760 146330 000440
00020: 000000 017300 031463 000000 000440 017070 000000 031460
00030: 035144 000040 006000 031760 000000 146352 000440 017340
00040: 033760 000000 000000 000505 017140 033760 000000 000506
00050: 000000 017140 033760 000000 000507 017140 000000 033760
00060: 000000 000510 017000 067762 000000 034001 034332 101760
00070: 146356 000440 000000 017300 000000 000000 000000 000000
00100: SAME: TO 000200-1

*T RECORD 2411 (%4553, #96B)
00000: 036000 060156 177523 001262 000000 031465 000000 000440
00010: 017070 031466 000000 000000 000440 017170 031467 000000
00020: 000000 000440 017170 031470 000000 000440 000000 017170
00030: 031760 146343 000440 017300 000000 021760 000000 000440
00040: 017070 031460 000000 034071 000040 006000 031760 146343
00050: 000000 000440 017300 101760 000000 000440 000000 017070
00060: 031760 134716 000440 017300 000000 101760 000000 000440
00070: 017070 031760 000000 146344 000000 000000 000000 000000
00100: SAME: TO 000200-1

*T RECORD 2412 (%4554, #96C)
00000: 036000 060156 034274 001340 000000 000440 017360 101760
00010: 146356 000440 000000 017340 153271 034001 034350 033760
00020: 000000 000000 000505 017140 033760 000000 000000 000506
```

```
00030: 017140 033760 000000 000507 000000 017140 033760 000000
00040: 000510 017000 000000 031760 146352 000440 017300 031465
00050: 000000 000000 000440 017070 031466 000000 000000 000440
00060: 017170 031467 000000 000440 000000 017170 031470 000000
00070: 000440 017170 000000 031460 000000 000000 000000 000000
00100: SAME: TO 000200-1

*T RECORD 2413 (%4555, #96D)
00000: 036000 060156 134240 001416 000000 034437 000040 016000
00010: 031760 146330 000000 000440 017340 033760 000000 000511
00020: 000000 017000 031760 146327 000440 017340 000000 033760
00030: 000000 000512 017000 075407 000000 034001 034366 121171
00040: 000000 000442 000000 017000 031460 034406 120040 005000
00050: 000000 121172 000000 000441 017000 031460 000000 034406
00060: 120040 005000 031760 146343 000000 000440 017340 031760
00070: 000000 000500 000000 017000 000000 000000 000000 000000
00100: SAME: TO 000200-1

*T RECORD 2414 (%4556, #96E)
00000: 036000 060156 000173 001474 000000 031460 034400 014040
00010: 005000 031760 000000 134716 000440 017340 031760 000000
00020: 000000 000500 017000 031460 034437 044040 000000 005000
00030: 031760 146345 000440 017340 000000 031760 000000 000500
00040: 017000 031460 000000 034437 020040 005000 031460 034440
00050: 000000 000040 006000 106554 034001 034404 000000 031460
00060: 034640 000040 006000 031460 000000 034437 000040 016000
00070: 031460 034440 000000 000040 000000 000000 000000 000000
00100: SAME: TO 000200-1

*T RECORD 2415 (%4557, #96F)
00000: 036000 060156 121103 001552 000000 006000 031460 035144
00010: 000040 006000 000000 101760 146356 000440 017300 031465
00020: 000000 000000 000440 017070 031466 000000 000000 000440
00030: 017170 031467 000000 000440 000000 017170 031470 000000
00040: 000440 017170 000000 033760 146356 000440 017000 031760
00050: 000000 146327 000440 017300 031461 000000 000000 000440
00060: 017070 031760 146330 000440 000000 017300 031462 000000
00070: 000440 017070 000000 171237 000000 000000 000000 000000
00100: SAME: TO 000200-1

*T RECORD 2416 (%4560, #970)
00000: 036000 060156 124252 001630 000000 034001 034422 031760
00010: 146345 000440 000000 017300 101760 000000 000440 017070
00020: 000000 031460 035164 000040 006000 031760 000000 146343
00030: 000440 017340 031760 000000 000000 000500 017000 031460
00040: 034433 014040 000000 005000 031760 134716 000440 017340
00050: 000000 031760 000000 000500 017000 031460 000000 034437
00060: 044040 005000 031760 146345 000000 000440 017340 031760
00070: 000000 000500 000000 017000 000000 000000 000000 000000
00100: SAME: TO 000200-1

*T RECORD 2417 (%4561, #971)
00000: 036000 060156 146257 001706 000000 031460 034640 120040
00010: 006000 031460 000000 034437 000040 016000 031460 000000
00020: 000000 000040 007000 167522 034001 034440 000000 031760
00030: 146334 000440 017340 033760 000000 000000 000513 017000
00040: 031760 146335 000000 000440 017340 033760 000000 000514
00050: 000000 017000 123162 000000 000451 017000 000000 123161
```

EP 0 455 351 A2

```
00060: 000000 000452 017000 101760 000000 146356 000440 017340
00070: 033760 000000 000000 000505 000000 000000 000000 000000
00100: SAME: TO 000200-1


*T RECORD 2418 (%4562, #972)
00000: 036000 060156 175443 001764 000000 017140 031473 000000
00010: 000440 017000 000000 031460 034453 120040 005000 003172
00020: 000000 000000 000445 017000 033760 000000 000000 000506
00030: 017140 031473 000000 000440 000000 017000 031460 034457
00040: 120040 005000 000000 145676 034001 034456 003171 000000
00050: 000000 000446 017000 033760 000000 000507 000000 017140
00060: 031474 000000 000440 017000 000000 031460 034463 120040
00070: 005000 003172 000000 000000 000000 000000 000000 000000
00100: SAME: TO 000200-1


*T RECORD 2419 (%4563, #973)
00000: 036000 060156 035724 002042 000000 000447 017000 033760
00010: 000000 000510 000000 017000 031474 000000 000440 017000
00020: 000000 031460 034467 120040 005000 003171 000000 000000
00030: 000450 017000 031460 000000 000000 000040 007000 031460
00040: 025732 000040 000000 006000 031760 153475 000440 017340
00050: 000000 033760 000000 000511 017000 031760 000000 152502
00060: 000440 017340 101262 034001 000000 034474 031760 000000
00070: 000500 017000 000000 031460 000000 000000 000000 000000
00100: SAME: TO 000200-1


*T RECORD 2420 (%4564, #974)
00000: 036000 060156 060715 002120 000000 034520 120040 005000
00010: 033760 146367 000000 000440 017000 101460 000000 000440
00020: 000000 017300 121165 000000 000451 017070 000000 101171
00030: 000000 000451 017170 121166 000000 000000 000451 017170
00040: 101171 000000 000000 000451 017170 001560 000006 000440
00050: 000000 017300 031471 000000 000440 017000 000000 031460
00060: 034516 020040 005000 031760 000000 146402 000440 017070
00070: 031460 025200 000000 000040 000000 000000 000000 000000
00100: SAME: TO 000200-1


*T RECORD 2421 (%4565, #975)
00000: 036000 060156 054472 002176 000000 006000 031460 034547
00010: 000040 006000 000000 040542 034001 034512 031760 146376
00020: 000000 000440 017300 031473 000000 000440 000000 017070
00030: 031474 000000 000440 017170 000000 031460 034520 000040
00040: 016000 031760 000000 146376 000440 017070 031460 025200
00050: 000000 000040 006000 031760 152503 000440 000000 017340
00060: 031760 000000 000500 017000 000000 031460 034545 120040
00070: 005000 101760 000000 146367 000000 000000 000000 000000
00100: SAME: TO 000200-1


*T RECORD 2422 (%4566, #976)
00000: 036000 060156 105144 002254 000000 000440 017300 121167
00010: 000000 000451 000000 017070 101171 000000 000451 017170
00020: 000000 121170 000000 000451 017170 101171 000000 000000
00030: 000451 017170 157071 034001 000000 034530 033760 146367
00040: 000440 017000 000000 001560 000006 000440 017300 031471
00050: 000000 000000 000440 017000 031460 034543 000000 020040
00060: 005000 031760 146402 000440 000000 017070 031460 025200
00070: 000040 006000 000000 031460 000000 000000 000000 000000
00100: SAME: TO 000200-1
```

```
*T RECORD 2423 (%4567, #977)
00000: 036000 060156 015673 002332 000000 034547 000040 006000
00010: 031760 146400 000000 000440 017300 031473 000000 000440
00020: 000000 017070 031474 000000 000440 017170 000000 031460
00030: 034545 000040 016000 031760 000000 146400 000440 017070
00040: 031460 025200 000000 000040 006000 031460 025763 000040
00050: 000000 006000 130331 034001 034546 031460 000000 000000
00060: 000040 007000 011471 000000 000000 000440 017000 031460
00070: 034554 020040 000000 005000 000000 000000 000000 000000
00100: SAME: TO 000200-1

*T RECORD 2424 (%4570, #978)
00000: 036000 060156 140556 002410 000000 033760 000031 000452
00010: 017000 033760 000000 000031 000441 017000 031460 034556
00020: 000000 000040 016000 033760 000011 000452 000000 017000
00030: 033760 000011 000441 017000 000000 031760 146402 000440
00040: 017340 043260 000000 000000 000453 017000 043260 000000
00050: 000000 000454 017000 043260 000000 000455 000000 017000
00060: 043260 000000 000456 017000 000000 031472 000000 000440
00070: 017000 031741 000000 034001 000000 000000 000000 000000
00100: SAME: TO 000200-1

*T RECORD 2425 (%4571, #979)
00000: 036000 060156 052142 002466 000000 034564 033760 034604
00010: 020517 005000 000000 013472 000000 000452 017000 043577
00020: 000000 000377 000457 017000 003177 000000 000000 000454
00030: 017000 031760 000000 002500 000000 017034 033760 000000
00040: 000517 017140 000000 043577 000377 000457 017000 003177
00050: 000000 000000 000453 017000 033760 000000 000000 000517
00060: 017000 043577 000377 000457 000000 017000 003177 000000
00070: 000456 017000 000000 031760 000000 000000 000000 000000
00100: SAME: TO 000200-1

*T RECORD 2426 (%4572, #97A)
00000: 036000 060156 034464 002544 000000 000000 002500 017034
00010: 033760 000000 000000 000517 017140 043577 000377 000457
00020: 000000 017000 150546 034001 034602 003177 000000 000000
00030: 000455 017000 031460 034563 000000 000040 016000 033461
00040: 000000 000452 000000 017000 043260 000000 000440 017000
00050: 000000 030473 000000 000440 017000 033472 000000 000000
00060: 000441 017000 031460 003325 000000 000040 006000 033461
00070: 000000 000453 000000 017000 000000 000000 000000 000000
00100: SAME: TO 000200-1

*T RECORD 2427 (%4573, #97B)
00000: 036000 060156 063641 002622 000000 043260 000000 000440
00010: 017000 030474 000000 000000 000440 017000 033472 000000
00020: 000000 000441 017000 031460 003325 000040 000000 006000
00030: 033461 000000 000454 017000 000000 043260 000000 000440
00040: 017000 173054 000000 034001 034620 030475 000000 000440
00050: 000000 017000 033472 000000 000441 017000 000000 031460
00060: 003325 000040 006000 033461 000000 000000 000455 017000
00070: 043260 000000 000000 000440 000000 000000 000000 000000
00100: SAME: TO 000200-1

*T RECORD 2428 (%4574, #97C)
00000: 036000 060156 107324 002700 000000 017000 030476 000000
```

500

```
00010: 000440 017000 000000 033472 000000 000441 017000 031460
00020: 000000 003325 000040 006000 033461 000000 000000 000456
00030: 017000 041573 000377 002440 000000 017034 033760 000000
00040: 000513 017000 000000 033174 000000 000453 017000 041575
00050: 000000 000377 002440 017034 033760 000000 000000 000514
00060: 017000 174544 034001 034636 000000 033176 000000 000454
00070: 017000 031460 000000 000000 000000 000000 000000 000000
00100: SAME: TO 000200-1
```

*T RECORD 2429 (%4575, #97D)
```
00000: 036000 060156 011276 002756 000000 000040 007000 031760
00010: 153022 000440 000000 017340 031760 000000 000500 017000
00020: 000000 031460 034701 020040 005000 031760 000000 146347
00030: 000440 017340 033760 000000 000000 000515 017000 033575
00040: 000260 000455 000000 017000 031460 035061 000040 006000
00050: 000000 031460 025732 000040 006000 031460 000000 000000
00060: 006040 017000 033760 000140 000000 000441 017000 031760
00070: 146465 000440 000000 017340 000000 000000 000000 000000
00100: SAME: TO 000200-1
```

*T RECORD 2430 (%4576, #97E)
```
00000: 036000 060156 137140 003034 000000 031760 000000 001500
00010: 017035 142047 000000 034001 034654 033561 000000 000501
00020: 000000 017000 033465 000000 000442 017000 000000 033466
00030: 000000 000443 017000 033467 000000 000000 000452 017000
00040: 113165 000000 000000 000452 017000 033470 000000 000453
00050: 000000 017000 113166 000000 000453 017000 000000 031760
00060: 146347 000440 017340 033760 000000 000000 000510 017000
00070: 033570 000240 000000 000450 000000 000000 000000 000000
00100: SAME: TO 000200-1
```

*T RECORD 2431 (%4577, #97F)
```
00000: 036000 060156 110403 003112 000000 017000 033760 153477
00010: 000440 017000 000000 043260 000000 000444 017000 043260
00020: 000000 000000 000454 017000 031460 033066 000000 000040
00030: 006000 111746 034001 034672 000000 031460 025763 000040
00040: 006000 031760 000000 146347 000440 017340 033760 000000
00050: 000000 000516 017000 043576 000017 000456 000000 017000
00060: 043260 000000 000457 017000 000000 031460 035205 000040
00070: 006000 031460 000000 035056 000000 000000 000000 000000
00100: SAME: TO 000200-1
```

*T RECORD 2432 (%4600, #980)
```
00000: 036000 060156 003317 003170 000000 000040 016000 031760
00010: 146347 000440 000000 017340 033760 000000 000515 017000
00020: 000000 031760 153023 000440 017340 031760 000000 000000
00030: 000500 017000 031460 034713 000000 020040 005000 033575
00040: 000120 000455 000000 017000 031460 035061 000040 006000
00050: 000000 044734 034001 034710 031460 035104 000000 000040
00060: 006000 043575 000057 000455 000000 017000 033575 000100
00070: 000455 017000 000000 031760 000000 000000 000000 000000
00100: SAME: TO 000200-1
```

*T RECORD 2433 (%4601, #981)
```
00000: 036000 060156 101150 003246 000000 146342 000440 017340
00010: 031760 000000 000000 000500 017000 031460 034717 020040
00020: 000000 005000 033575 002000 000455 017000 000000 031760
00030: 146336 000440 017340 031760 000000 000000 000500 017000
```

501

```
00040: 031460 034723 000000 020040 005000 033575 001000 000455
00050: 000000 017000 031460 034470 000040 006000 000000 031760
00060: 146351 000440 017340 031760 000000 000000 000500 017000
00070: 023506 034001 000000 034726 000000 000000 000000 000000
00100: SAME: TO 000200-1

*T RECORD 2434 (%4602, #982)
00000: 036000 060156 125527 003324 000000 031460 000000 122040
00010: 017000 043575 000000 000017 000456 017000 033760 000377
00020: 000000 000457 017000 031460 035205 000040 000000 006000
00030: 031760 146464 000440 017340 000000 033760 000000 000504
00040: 017000 031460 000000 034756 044040 005000 031460 025732
00050: 000000 000040 006000 033760 034140 000441 000000 017000
00060: 033465 000000 000442 017000 000000 033466 000000 000443
00070: 017000 033467 000000 000000 000000 000000 000000 000000
00100: SAME: TO 000200-1

*T RECORD 2435 (%4603, #983)
00000: 036000 060156 032371 003402 000000 000452 017000 113165
00010: 000000 000452 000000 017000 033470 000000 000453 017000
00020: 000000 124427 034001 034744 113166 000000 000000 000453
00030: 017000 033575 000400 000450 000000 017000 031760 146376
00040: 000440 017340 000000 033760 000000 000504 017000 031760
00050: 000000 146400 000440 017340 033760 000000 000000 000514
00060: 017000 033760 150467 000440 000000 017000 033760 153477
00070: 000447 017000 000000 031460 000000 000000 000000 000000
00100: SAME: TO 000200-1

*T RECORD 2436 (%4604, #984)
00000: 036000 060156 006175 003460 000000 033066 000040 006000
00010: 031460 025763 000000 000040 006000 035464 000000 000444
00020: 000000 017000 031464 000000 000440 017000 000000 031460
00030: 035004 044040 005000 031460 000000 025732 000040 006000
00040: 043010 034001 000000 034762 033760 054140 000441 017000
00050: 000000 033465 000000 000442 017000 033466 000000 000000
00060: 000443 017000 033467 000000 000000 000452 017000 113165
00070: 000000 000452 000000 017000 000000 000000 000000 000000
00100: SAME: TO 000200-1

*T RECORD 2437 (%4605, #985)
00000: 036000 060156 153231 003536 000000 033470 000000 000453
00010: 017000 113166 000000 000000 000453 017000 043575 177377
00020: 000000 000450 017000 031760 146376 000440 000000 017340
00030: 031760 000000 002500 017034 000000 033760 000000 000504
00040: 017000 031760 000000 146400 000440 017340 031760 000000
00050: 000000 002500 017034 033760 000000 000514 000000 017000
00060: 131241 034001 035000 033760 000000 151067 000440 017000
00070: 033760 153477 000000 000447 000000 000000 000000 000000
00100: SAME: TO 000200-1

*T RECORD 2438 (%4606, #986)
00000: 036000 060156 166532 003614 000000 017000 031460 033066
00010: 000040 006000 000000 031460 025763 000040 006000 035464
00020: 000000 000000 000444 017000 031464 000000 000000 000440
00030: 017000 031460 035030 044040 000000 005000 031460 025732
00040: 000040 006000 000000 033760 064140 000441 017000 033465
00050: 000000 000000 000442 017000 033466 000000 000000 000443
00060: 017000 033467 000000 000452 000000 017000 113165 000000
```

```
00070: 000452 017000 000000 033470 000000 000000 000000 000000
00100: SAME: TO 000200-1

*T RECORD 2439 (%4607, #987)
00000: 036000 060156 034204 003672 000000 000000 000453 017000
00010: 014050 034001 000000 035016 113166 000000 000453 017000
00020: 000000 033575 000400 000450 017000 101760 000000 146376
00030: 000440 017340 033760 000000 000000 000504 017000 101760
00040: 146400 000440 000000 017340 033760 000000 000514 017000
00050: 000000 033760 151467 000440 017000 103760 000000 153477
00060: 000447 017000 031460 033066 000000 000040 006000 031460
00070: 025763 000040 000000 006000 000000 000000 000000 000000
00100: SAME: TO 000200-1

*T RECORD 2440 (%4610, #988)
00000: 036000 060156 054110 003750 000000 035464 000000 000444
00010: 017000 031464 000000 000000 000440 017000 031460 035056
00020: 000000 044040 005000 031460 025732 000040 000000 006000
00030: 034134 034001 035034 033760 000000 070140 000441 017000
00040: 033465 000000 000000 000442 017000 033466 000000 000443
00050: 000000 017000 033467 000000 000452 017000 000000 113165
00060: 000000 000452 017000 033470 000000 000000 000453 017000
00070: 113166 000000 000000 000453 000000 000000 000000 000000
00100: SAME: TO 000200-1

*T RECORD 2441 (%4611, #989)
00000: 036000 060156 103112 004026 000000 017000 043575 177377
00010: 000450 017000 000000 101760 146376 000440 017340 031760
00020: 000000 000000 002500 017034 033760 000000 000000 000504
00030: 017000 101760 146400 000440 000000 017340 031760 000000
00040: 002500 017034 000000 033760 000000 000514 017000 065313
00050: 000000 034001 035052 033760 152067 000440 000000 017000
00060: 103760 153477 000447 017000 000000 031460 033066 000040
00070: 006000 031460 000000 025763 000000 000000 000000 000000
00100: SAME: TO 000200-1

*T RECORD 2442 (%4612, #98A)
00000: 036000 060156 016043 004104 000000 000040 006000 031760
00010: 146345 000440 000000 017300 041260 000000 000440 017070
00020: 000000 031460 000000 000040 007000 031460 000000 025732
00030: 000040 006000 031460 000000 000000 006040 017000 033760
00040: 000140 000441 000000 017000 033465 000000 000442 017000
00050: 000000 033466 000000 000443 017000 033467 000000 000000
00060: 000452 017000 113165 000000 000000 000452 017000 060470
00070: 034001 035070 000000 033470 000000 000000 000000 000000
00100: SAME: TO 000200-1

*T RECORD 2443 (%4613, #98B)
00000: 036000 060156 070417 004162 000000 000000 000453 017000
00010: 113166 000000 000000 000453 017000 033475 000000 000450
00020: 000000 017000 031460 000000 000040 017000 000000 033760
00030: 153477 000440 017000 043260 000000 000000 000444 017000
00040: 043260 000000 000000 000454 017000 031460 033066 000040
00050: 000000 006000 031760 153476 000440 017300 000000 031460
00060: 000000 000440 017070 031460 000000 025763 000040 006000
00070: 031460 000000 000000 000040 000000 000000 000000 000000
00100: SAME: TO 000200-1
```

```
*T RECORD 2444 (%4614, #98C)
00000: 036000 060156 046015 004240 000000 007000 031460 025732
00010: 000040 006000 000000 031760 153476 000440 017340 016767
00020: 000000 034001 035106 033760 000000 000513 000000 017000
00030: 033760 153024 000445 017000 000000 033760 153477 000446
00040: 017000 031466 000000 000440 017340 030760 000000
00050: 000000 000500 017000 043660 000377 000450 000000 017000
00060: 041660 177400 002440 017034 000000 033760 000000 000507
00070: 017140 030760 000000 000000 000000 000000 000000 000000
00100: SAME: TO 000200-1

*T RECORD 2445 (%4615, #98D)
00000: 036000 060156 141207 004316 000000 000500 017000 043660
00010: 000377 000452 000000 017000 041660 177400 002440 017034
00020: 000000 033760 000000 000511 017000 001165 000000 000000
00030: 000447 017340 031760 000000 000000 002500 017034 123265
00040: 034001 035124 000000 033760 000000 000514 017000 001165
00050: 000000 000000 000450 017340 033574 000000 000000 000514
00060: 017000 001165 000000 000451 000000 017340 031760 000000
00070: 002500 017034 000000 033760 000000 000000 000000 000000
00100: SAME: TO 000200-1

*T RECORD 2446 (%4616, #98E)
00000: 036000 060156 053613 004374 000000 000000 000515 017000
00010: 001165 000000 000000 000452 017340 033575 000000 000515
00020: 000000 017000 031466 000000 000440 017300 000000 031474
00030: 000000 000440 017070 031475 000000 000000 000440 017170
00040: 003566 000002 000000 000446 017000 121166 000000 000453
00050: 000000 017000 031460 035112 014040 005140 000000 142735
00060: 034001 035142 031460 025763 000000 000040 006000 031460
00070: 000000 000040 000000 007000 000000 000000 000000 000000
00100: SAME: TO 000200-1

*T RECORD 2447 (%4617, #98F)
00000: 036000 060156 152454 004452 000000 031460 025732 000040
00010: 006000 033760 000000 070416 000441 017000 043260 000000
00020: 000000 000444 017000 043260 000000 000454 000000 017000
00030: 101760 146356 000440 017340 000000 033760 000000 000502
00040: 017140 033760 000000 000000 000503 017140 123562 000000
00050: 000000 000512 017140 123563 000000 000513 000000 017000
00060: 031760 146346 000440 017340 000000 033760 000000 000510
00070: 017000 043260 000000 000000 000000 000000 000000 000000
00100: SAME: TO 000200-1

*T RECORD 2448 (%4620, #990)
00000: 036000 060156 131725 004530 000000 000447 017000 070660
00010: 034001 035160 000000 031460 000000 006040 017000 031460
00020: 000000 033066 000040 006000 031460 025763 000000 000040
00030: 006000 031460 000000 000040 000000 007000 031460 025732
00040: 000040 006000 000000 033760 070416 000441 017000 033760
00050: 000000 000377 000444 017000 033760 000377 000000 000454
00060: 017000 033465 000000 000442 000000 017000 033466 000000
00070: 000443 017000 000000 033467 000000 000000 000000 000000
00100: SAME: TO 000200-1

*T RECORD 2449 (%4621, #991)
00000: 036000 060156 076222 004606 000000 000000 000452 017000
00010: 113165 000000 000000 000452 017000 033470 000000 000453
```

```
00020: 000000 017000 113166 000000 000453 017000 000000 061004
00030: 034001 035176 031760 146346 000000 000440 017340 033760
00040: 000000 000510 000000 017000 043260 000000 000447 017000
00050: 000000 031460 000000 006040 017000 031460 000000 033066
00060: 000040 006000 031460 025763 000000 000040 006000 031460
00070: 000000 000040 000000 007000 000000 000000 000000 000000
00100: SAME: TO 000200-1

*T RECORD 2450 (%4622, #992)                            .
00000: 036000 060156 032354 004664 000000 031460 025732 000040
00010: 006000 033760 000000 070432 000441 017000 033477 000000
00020: 000000 000444 017000 033477 000000 000454 000000 017000
00030: 033465 000000 000442 017000 000000 033466 000000 000443
00040: 017000 033467 000000 000000 000452 017000 075400 034001
00050: 000000 035214 113165 000000 000452 017000 000000 033470
00060: 000000 000453 017000 113166 000000 000000 000453 017000
00070: 033476 000000 000000 000450 000000 000000 000000 000000
00100: SAME: TO 000200-1

*T RECORD 2451 (%4623, #993)
00000: 036000 060156 021524 004742 000000 017000 043260 000000
00010: 000447 017000 000000 031460 000000 006040 017000 031460
00020: 000000 033066 000040 006000 031460 025763 000000 000040
00030: 006000 031460 000000 000040 000000 007000 101760 146356
00040: 000440 017340 000000 033760 000000 000505 017140 033760
00050: 000000 000000 000506 017140 033760 000000 000000 000507
00060: 017140 033760 000000 000510 000000 017000 003255 034001
00070: 035232 031460 000000 035164 000000 000000 000000 000000
00100: SAME: TO 000200-1

*T RECORD 2452 (%4624, #994)
00000: 036000 060156 147070 005020 000000 000040 006000 031460
00010: 000000 000040 000000 007000 041660 003700 001440 017036
00020: 000000 033760 000000 000500 017000 001560 000000 153424
00030: 000440 017340 031460 000000 000000 000100 015000 031460
00040: 000000 000040 000000 007000 031760 101362 000440 017300
00050: 000000 031760 000071 000440 017070 031460 000000 000000
00060: 000040 007000 031760 153475 000000 000440 017300 011460
00070: 000000 000440 000000 017070 000000 000000 000000 000000
00100: SAME: TO 000200-1

*T RECORD 2453 (%4625, #995)
00000: 036000 060156 001151 005076 000000 033760 000070 000441
00010: 017000 001561 000000 074402 000440 017340 177664 034001
00020: 000000 035250 033760 000000 000502 017000 000000 001561
00030: 074476 000440 017340 033760 000000 000000 000503 017000
00040: 011460 000000 000000 000440 017000 031460 035264 020040
00050: 000000 005000 111560 000002 000440 017000 000000 031460
00060: 035271 020040 005000 001561 000000 074476 000440 017300
00070: 031760 000002 000000 000440 000000 000000 000000 000000
00100: SAME: TO 000200-1

*T RECORD 2454 (%4626, #996)
00000: 036000 060156 041104 005154 000000 017070 001561 074402
00010: 000440 017300 000000 031760 000401 000440 017070 031460
00020: 000000 035275 000040 016000 001561 074476 000000 000440
00030: 017300 031760 000001 000440 000000 017070 172405 034001
00040: 035266 001561 000000 074402 000440 017300 031760 000402
```

```
00050: 000000 000440 017070 031460 035275 000040 000000 016000
00060: 001561 074476 000440 017300 000000 031760 000001 000440
00070: 017070 001561 000000 074402 000000 000000 000000 000000
00100: SAME: TO 000200-1

*T RECORD 2455 (%4627, #997)
00000: 036000 060156 036463 005232 000000 000440 017300 031760
00010: 001001 000440 000000 017070 031460 001516 000040 006000
00020: 000000 031460 036701 000040 006000 031460 000000 000000
00030: 000040 007000 031760 101362 000000 000440 017300 031760
00040: 000070 000440 000000 017070 031460 000000 000040 007000
00050: 000000 031760 101362 000440 017300 155047 000000 034001
00060: 035304 031760 000073 000440 000000 017070 031460 000000
00070: 000040 007000 000000 033760 000000 000000 000000 000000
00100: SAME: TO 000200-1

*T RECORD 2456 (%4630, #998)
00000: 036000 060156 151470 005310 000000 000072 000441 017000
00010: 001561 074402 000000 000440 017340 033760 000000 000500
00020: 000000 017000 041560 100000 000440 017000 000000 031460
00030: 035320 020040 005000 043560 000000 037777 000440 017000
00040: 033560 040000 000000 000440 017000 031460 000000 000440
00050: 000000 017070 041260 000000 000440 017030 000000 031460
00060: 035326 000040 016000 043560 000000 037477 000440 017000
00070: 033560 100100 000000 000440 000000 000000 000000 000000
00100: SAME: TO 000200-1

*T RECORD 2457 (%4631, #999)
00000: 036000 060156 035104 005366 000000 017000 106611 034001
00010: 035322 031460 000000 000000 000440 017070 031760 146334
00020: 000000 000440 017300 041260 000000 000440 000000 017070
00030: 101760 000000 000440 017030 000000 031760 146335 000440
00040: 017360 031760 000000 101362 000440 017300 031760 100073
00050: 000000 000440 017070 031460 000000 000040 000000 007000
00060: 033760 000072 000441 017000 000000 001561 074402 000440
00070: 017340 033760 000000 000000 000000 000000 000000 000000
00100: SAME: TO 000200-1

*T RECORD 2458 (%4632, #99A)
00000: 036000 060156 021500 005444 000000 000500 017000 041560
00010: 000200 000440 000000 017000 031460 035344 020040 005000
00020: 000000 043560 177477 000440 017000 065651 000000 034001
00030: 035340 033560 000100 000440 000000 017000 031460 000000
00040: 000440 017070 000000 041260 000000 000440 017030 031460
00050: 000000 035352 000040 016000 043560 037477 000000 000440
00060: 017000 033560 040200 000440 000000 017000 031460 000000
00070: 000440 017070 000000 031760 000000 000000 000000 000000
00100: SAME: TO 000200-1

*T RECORD 2459 (%4633, #99B)
00000: 036000 060156 022232 005522 000000 146335 000440 017300
00010: 041260 000000 000000 000440 017070 101760 000000 000440
00020: 000000 017030 031760 146334 000440 017360 000000 031760
00030: 101362 000440 017300 031760 000000 100073 000440 017070
00040: 031460 000000 000000 000040 007000 111017 034001 035356
00050: 000000 033760 000072 000441 017000 001561 000000 074402
00060: 000440 017340 033760 000000 000000 000500 017000 041560
00070: 004000 000440 000000 017000 000000 000000 000000 000000
```

```
00100: SAME: TO 000200-1

*T RECORD 2460 (%4634, #99C)
00000: 036000 060156 103452 005600 000000 031460 035370 020040
00010: 005000 043560 000000 171777 000440 017000 033560 002000
00020: 000000 000440 017000 031460 000000 000440 000000 017070
00030: 041260 000000 000440 017030 000000 031460 035377 000040
00040: 016000 043560 000000 171777 000440 017000 033560 004000
00050: 000000 000440 017000 031460 000000 000440 000000 017070
00060: 021760 000000 000440 017030 000000 145541 034001 035374
00070: 031760 146331 000000 000440 000000 000000 000000 000000
00100: SAME: TO 000200-1

*T RECORD 2461 (%4635, #99D)
00000: 036000 060156 032702 005656 000000 017360 031760 146332
00010: 000440 017360 000000 101760 000000 000440 017030 031760
00020: 000000 146343 000440 017360 031760 101362 000000 000440
00030: 017300 031760 100073 000440 000000 017070 031460 000000
00040: 000040 007000 000000 113560 000007 000440 017000 031460
00050: 000000 035405 000040 016000 031760 146464 000000 000440
00060: 017340 033760 035457 000501 000000 006000 031460 035413
00070: 044040 005000 000000 033561 000000 000000 000000 000000
00100: SAME: TO 000200-1

*T RECORD 2462 (%4636, #99E)
00000: 036000 060156 027471 005734 000000 000001 000441 017000
00010: 033760 001000 000000 000443 017000 077300 034001 035412
00020: 000000 031460 035415 000040 016000 043561 000000 177776
00030: 000441 017000 033760 000400 000000 000443 017000 037460
00040: 000000 000444 000000 017002 123564 000020 000444 017000
00050: 000000 123560 000020 000440 017000 031460 000000 035457
00060: 000040 006000 031461 000000 000000 000440 017070 033760
00070: 000067 000442 000000 017000 000000 000000 000000 000000
00100: SAME: TO 000200-1

*T RECORD 2463 (%4637, #99F)
00000: 036000 060156 056451 006012 000000 001562 074402 000440
00010: 017340 033464 000000 000000 000440 017000 033760 000000
00020: 000000 000504 017000 033463 035457 000441 000000 006000
00030: 031760 176377 000440 017034 000000 126643 034001 035430
00040: 041564 000000 000000 000500 017030 031561 000000 000500
00050: 000000 017070 031760 101362 000440 017300 000000 031760
00060: 100070 000440 017070 031760 000000 146464 000440 017340
00070: 031760 000000 000000 000500 000000 000000 000000 000000
00100: SAME: TO 000200-1

*T RECORD 2464 (%4640, #9A0)
00000: 036000 060156 143765 006070 000000 015035 031760 000000
00010: 000500 015035 000000 031760 000000 000500 015035 031460
00020: 000000 000000 000100 015000 031460 000000 000000 000040
00030: 011000 031760 000000 000400 000000 011000 001740 000000
00040: 044440 017035 000000 031760 000000 000400 011000 000740
00050: 000000 000000 044440 017000 117327 034001 000000 035446
00060: 031660 000000 000500 017035 000000 031760 000000 000400
00070: 011000 000740 000000 000000 000000 000000 000000 000000
00100: SAME: TO 000200-1

*T RECORD 2465 (%4641, #9A1)
```

```
00000: 036000 060156 101225 006146 000000 044440 017000 031660
00010: 000000 000500 000000 017035 031760 000000 000400 017000
00020: 000000 000740 000000 044440 017000 031660 000000 000000
00030: 003500 017035 031760 146465 000000 000440 017360 031460
00040: 000000 000040 000000 007000 033760 007777 000442 017000
00050: 000000 041562 000000 003420 017010 041560 000000 000017
00060: 001440 017034 033760 000000 000000 000502 017000 031562
00070: 000000 003420 000000 017010 000000 000000 000000 000000
00100: SAME: TO 000200-1

*T RECORD 2466 (%4642, #9A2)
00000: 036000 060156 026635 006224 000000 166304 034001 035464
00010: 031461 000000 000000 000440 017034 033760 000000 000501
00020: 000000 007000 033760 000066 000441 017000 000000 031460
00030: 035471 000040 016000 033760 000000 000072 000441 017000
00040: 001561 074402 000000 000440 017340 033760 000000 000500
00050: 000000 017000 041560 020000 000440 017000 000000 031460
00060: 035507 020040 005000 043560 000000 147777 000440 017000
00070: 033560 010000 000000 000440 000000 000000 000000 000000
00100: SAME: TO 000200-1

*T RECORD 2467 (%4643, #9A3)
00000: 036000 060156 176150 006302 000000 017000 031460 000000
00010: 000440 017070 000000 031760 134722 000440 017340 031760
00020: 000000 146327 000440 017360 035367 034001 000000 035502
00030: 031760 134721 000440 017340 000000 031760 146330 000440
00040: 017360 031760 000000 130501 000440 017300 101760 000000
00050: 000000 000440 017070 031460 035514 000040 000000 016000
00060: 043560 147777 000440 017000 000000 033560 020000 000440
00070: 017000 031460 000000 000000 000000 000000 000000 000000
00100: SAME: TO 000200-1

*T RECORD 2468 (%4644, #9A4)
00000: 036000 060156 127636 006360 000000 000440 017070 031760
00010: 130501 000440 000000 017300 041260 000000 000440 017070
00020: 000000 031760 101362 000440 017300 001561 000000 100001
00030: 000440 017070 021760 000000 000000 000440 017030 031760
00040: 146331 000440 000000 017360 160435 034001 035520 031760
00050: 000000 146332 000440 017360 031460 000000 000000 000040
00060: 007000 033760 000066 000441 000000 017000 001561 074402
00070: 000440 017340 000000 031760 000000 000000 000000 000000
00100: SAME: TO 000200-1

*T RECORD 2469 (%4645, #9A5)
00000: 036000 060156 041211 006436 000000 000000 000500 017000
00010: 031460 035144 000000 015040 006000 003561 074476 000443
00020: 000000 017000 031463 000000 000440 017340 000000 033760
00030: 000000 000500 017000 041560 000000 000010 000440 017000
00040: 031460 035541 000000 020040 005000 031760 146346 000440
00050: 000000 017300 101760 000000 000440 017070 000000 043560
00060: 177763 000440 017000 164027 000000 034001 035536 033560
00070: 000004 000440 000000 017000 000000 000000 000000 000000
00100: SAME: TO 000200-1

*T RECORD 2470 (%4646, #9A6)
00000: 036000 060156 107127 006514 000000 043260 000000 000441
00010: 017000 031460 000000 035551 000040 016000 031760 146347
00020: 000000 000440 017340 030760 000000 000500 000000 017000
```

```
00030: 040660 000017 000440 017000 000000 031760 146346 000440
00040: 017300 031260 000000 000000 000440 017070 043560 177763
00050: 000000 000440 017000 033560 000010 000440 000000 017000
00060: 103760 000000 000441 017000 000000 031463 000000 000440
00070: 017300 031460 000000 000000 000000 000000 000000 000000
00100: SAME: TO 000200-1


*T RECORD 2471 (%4647, #9A7)
00000: 036000 060156 035327 006572 000000 000440 017070 031760
00010: 153022 000440 000000 017300 175711 034001 035554 031461
00020: 000000 000000 000440 017070 031760 101362 000000 000440
00030: 017300 031760 100067 000440 000000 017070 031460 035225
00040: 050040 006000 000000 031460 000000 000040 007000 041260
00050: 000000 000000 000440 017030 031760 146224 000000 000440
00060: 017360 033760 145553 000440 000000 017000 031760 153461
00070: 005440 017030 000000 031460 000000 000000 000000 000000
00100: SAME: TO 000200-1


*T RECORD 2472 (%4650, #9A8)
00000: 036000 060156 137277 006650 000000 032632 000040 006000
00010: 031460 000000 000000 000040 007000 031460 035604 054040
00020: 000000 005000 031760 153460 000440 017340 000000 033760
00030: 000000 000501 017000 023032 000000 034001 035572 033760
00040: 000040 000440 000000 017000 031560 000000 000500 017030
00050: 000000 031760 146347 000440 017360 031760 000000 153022
00060: 000440 017340 031760 000000 000000 000500 017000 031460
00070: 035604 020040 000000 005000 000000 000000 000000 000000
00100: SAME: TO 000200-1


*T RECORD 2473 (%4651, #9A9)
00000: 036000 060156 005400 006726 000000 031460 035144 000040
00010: 006000 031760 000000 146346 000440 017300 031461 000000
00020: 000000 000440 017070 031460 035225 000040 000000 006000
00030: 031460 036701 000040 006000 000000 031460 000000 000040
00040: 007000 041260 000000 000000 000440 017030 031760 146224
00050: 000000 000440 017360 142024 034001 035610 000000 033760
00060: 144423 000440 017000 031760 000000 153465 005440 017030
00070: 031460 032632 000000 000040 000000 000000 000000 000000
00100: SAME: TO 000200-1


*T RECORD 2474 (%4652, #9AA)
00000: 036000 060156 112202 007004 000000 006000 031460 000000
00010: 000040 007000 000000 031460 035644 054040 005000 031760
00020: 000000 153471 000440 017340 031760 000000 000000 002500
00030: 017034 043260 000000 000440 000000 017000 030760 000000
00040: 000500 017000 000000 120660 062000 000440 017000 033760
00050: 000000 000144 000441 017000 031460 003325 000000 000040
00060: 006000 031760 153023 000440 000000 017300 031461 000000
00070: 000440 017070 000000 107601 000000 000000 000000 000000
00100: SAME: TO 000200-1


*T RECORD 2475 (%4653, #9AB)
00000: 036000 060156 177764 007062 000000 034001 035626 031760
00010: 146315 000440 000000 017340 120561 000400 000440 017000
00020: 000000 033760 003435 000500 006000 041660 000000 177400
00030: 002440 017034 031460 035641 000000 020040 005000 033760
00040: 100000 000443 000000 017000 041563 000000 000500 017000
00050: 000000 035463 035634 020443 005002 031463 000000 000000
```

```
00060: 003440 017037 031460 035641 000000 120040 005000 101760
00070: 000000 000440 000000 017030 000000 000000 000000 000000
00100: SAME: TO 000200-1

*T RECORD 2476 (%4654, #9AC)
00000: 036000 060156 026044 007140 000000 031760 146316 000440
00010: 017360 031460 000000 036364 000040 006000 031460 035646
00020: 000000 000040 006000 070533 034001 035644 000000 031460
00030: 036701 000040 006000 031460 000000 000000 000040 007000
00040: 031760 153023 000000 000440 017340 033760 000000 000503
00050: 000000 017000 043260 000000 000442 017000 000000 021760
00060: 153024 000440 017300 120562 000000 000377 000440 017000
00070: 033463 003435 000000 000440 000000 000000 000000 000000
00100: SAME: TO 000200-1

*T RECORD 2477 (%4655, #9AD)
00000: 036000 060156 160221 007216 000000 006000 041660 177400
00010: 002440 017174 000000 103462 000000 000442 017000 111562
00020: 000000 000400 000440 017000 031460 035652 000000 120040
00030: 005000 031460 000000 000040 000000 007000 033760 000066
00040: 000440 017000 000000 074664 034001 035662 001560 074402
00050: 000000 000440 017340 033760 000000 000500 000000 017000
00060: 031460 000000 000440 017000 000000 031460 035673 140040
00070: 005000 043560 000000 037777 000000 000000 000000 000000
00100: SAME: TO 000200-1

*T RECORD 2478 (%4656, #9AE)
00000: 036000 060156 027701 007274 000000 000440 017000 033560
00010: 040000 000440 000000 017000 031460 035144 000040 006000
00020: 000000 031760 130501 000440 017300 041260 000000 000000
00030: 000440 017070 041560 000200 000000 000440 017000 031460
00040: 035702 020040 000000 005000 031760 153472 000440 017340
00050: 000000 033760 000000 000505 017000 031760 000000 153473
00060: 000440 017340 101107 034001 000000 035700 033760 000000
00070: 000506 017000 000000 031460 000000 000000 000000 000000
00100: SAME: TO 000200-1

*T RECORD 2479 (%4657, #9AF)
00000: 036000 060156 160674 007352 000000 036032 000040 006000
00010: 031760 134722 000000 000440 017340 033760 000000 000501
00020: 000000 017000 031760 153472 000440 017360 000000 031760
00030: 134721 000440 017340 033760 000000 000000 000502 017000
00040: 031760 153473 000000 000440 017360 031460 036006 000040
00050: 000000 006000 033760 000066 000441 017000 000000 001561
00060: 074402 000440 017300 043560 000000 177477 000440 017000
00070: 031560 000200 000000 000440 000000 000000 000000 000000
00100: SAME: TO 000200-1

*T RECORD 2480 (%4660, #9B0)
00000: 036000 060156 046676 007430 000000 017070 031760 101362
00010: 000440 017300 000000 026604 034001 035716 031760 100067
00020: 000000 000440 017070 031460 000000 000040 000000 007000
00030: 033760 000066 000440 017000 000000 001560 074402 000440
00040: 017340 033760 000000 000000 000500 017000 041560 000200
00050: 000000 000440 017000 031460 036000 020040 000000 005000
00060: 031760 000000 000500 017000 000000 031460 035745 114040
00070: 005000 043560 000000 037777 000000 000000 000000 000000
00100: SAME: TO 000200-1
```

510

```
*T RECORD 2481 (%4661, #9B1)
00000: 036000 060156 104045 007506 000000 000440 017000 031560
00010: 040000 000440 000000 017070 031760 130501 000440 017300
00020: 000000 041260 000000 000440 017070 031460 000000 035144
00030: 000040 006000 013156 034001 000000 035734 101760 146356
00040: 000440 017340 000000 033760 000000 000501 017140 033760
00050: 000000 000000 000502 017000 031760 153472 000000 000440
00060: 017300 031461 000000 000440 000000 017070 031760 153473
00070: 000440 017300 000000 031462 000000 000000 000000 000000
00100: SAME: TO 000200-1

*T RECORD 2482 (%4662, #9B2)
00000: 036000 060156 025341 007564 000000 000000 000440 017070
00010: 031460 036006 000000 000040 006000 031460 036000 000040
00020: 000000 016000 031760 134722 000440 017340 000000 033760
00030: 000000 000507 017000 031760 000000 153472 000440 017340
00040: 033760 000000 000000 000505 017000 031760 134721 000440
00050: 000000 017340 051144 034001 035752 033760 000000 000000
00060: 000510 017000 031760 153473 000000 000440 017340 033760
00070: 000000 000506 000000 017000 000000 000000 000000 000000
00100: SAME: TO 000200-1

*T RECORD 2483 (%4663, #9B3)
00000: 036000 060156 035036 007642 000000 031460 036032 000040
00010: 006000 101760 000000 146356 000440 017300 031465 000000
00020: 000000 000440 017070 031466 000000 000440 000000 017170
00030: 031467 000000 000440 017170 000000 031470 000000 000440
00040: 017170 031760 000000 146327 000440 017300 031467 000000
00050: 000000 000440 017070 031760 146330 000440 000000 017300
00060: 031470 000000 000440 017070 000000 031760 146345 000440
00070: 017300 051710 000000 034001 000000 000000 000000 000000
00100: SAME: TO 000200-1

*T RECORD 2484 (%4664, #9B4)
00000: 036000 060156 177745 007720 000000 035770 101760 000000
00010: 000440 017070 000000 031460 035164 000040 006000 033760
00020: 000000 000066 000441 017000 001561 074402 000000 000440
00030: 017300 043560 037777 000440 000000 017000 031560 100000
00040: 000440 017070 000000 031760 130501 000440 017300 101760
00050: 000000 000000 000440 017070 031760 101362 000000 000440
00060: 017300 031760 100067 000440 000000 017070 021760 000000
00070: 000440 017030 000000 031760 000000 000000 000000 000000
00100: SAME: TO 000200-1

*T RECORD 2485 (%4665, #9B5)
00000: 036000 060156 110207 007776 000000 146331 000440 017360
00010: 031760 146332 000000 000440 017360 031460 000000 000040
00020: 000000 007000 157272 034001 036006 031760 000000 146346
00030: 000440 017300 101760 000000 000000 000440 017070 033461
00040: 000000 000445 000000 017000 113562 000005 000446 017000
00050: 000000 033461 000000 000447 017000 003562 000000 000005
00060: 000450 017000 031460 035164 000000 000040 006000 113561
00070: 000005 000445 000000 017000 000000 000000 000000 000000
00100: SAME: TO 000200-1

*T RECORD 2486 (%4666, #9B6)
00000: 036000 060156 121743 010054 000000 033462 000000 000446
```

```
00010: 017000 003561 000000 000005 000447 017000 033462 000000
00020: 000000 000450 017000 031460 035164 000040 000000 006000
00030: 031760 153022 000440 017340 000000 031760 000000 000500
00040: 017000 102222 000000 034001 036024 031460 036031 020040
00050: 000000 005000 030760 000017 000440 017000 000000 031760
00060: 146347 000440 017340 041660 000000 000000 000500 017030
00070: 031760 146346 000000 000440 000000 000000 000000 000000
00100: SAME: TO 000200-1
```

*T RECORD 2487 (%4667, #9B7)
```
00000: 036000 060156 124764 010132 000000 017360 031460 000000
00010: 000040 007000 000000 031760 146346 000440 017300 101760
00020: 000000 000000 000440 017070 101760 146356 000000 000440
00030: 017300 031465 000000 000440 000000 017070 111566 000005·
00040: 000440 017170 000000 031465 000000 000440 017170 001566
00050: 000000 000005 000440 017170 031460 035144 000000 000040
00060: 006000 033241 034001 036042 000000 101760 146356 000440
00070: 017300 111565 000000 000005 000000 000000 000000 000000
00100: SAME: TO 000200-1
```

*T RECORD 2488 (%4670, #9B8)
```
00000: 036000 060156 157505 010210 000000 000440 017070 031466
00010: 000000 000440 000000 017170 001565 000005 000440 017170
00020: 000000 031466 000000 000440 017170 031460 000000 035144
00030: 000040 006000 031760 153022 000000 000440 017340 031760
00040: 000000 000500 000000 017000 031460 036057 020040 005000
00050: 000000 030760 000017 000440 017000 031760 000000 146347
00060: 000440 017340 041660 000000 000000 000500 017030 031760
00070: 146346 000440 000000 017360 000000 000000 000000 000000
00100: SAME: TO 000200-1
```

*T RECORD 2489 (%4671, #9B9)
```
00000: 036000 060156 056122 010266 000000 031460 000000 000040
00010: 007000 167771 000000 034001 036060 031760 150466 000440
00020: 000000 017300 101760 000000 000440 017070 000000 033760
00030: 146466 000440 017000 031460 000000 036103 000040 006000
00040: 033760 150467 000000 000440 017000 031460 036103 000040
00050: 000000 006000 033760 147066 000440 017000 000000 031460
00060: 036103 000040 006000 033760 000000 151067 000440 017000
00070: 031460 036103 000000 000040 000000 000000 000000 000000
00100: SAME: TO 000200-1
```

*T RECORD 2490 (%4672, #9BA)
```
00000: 036000 060156 011337 010344 000000 006000 033760 147466
00010: 000440 017000 000000 031460 036103 000040 006000 033760
00020: 000000 151467 000440 017000 031460 036103 000000 000040
00030: 006000 152627 034001 036076 000000 033760 150066 000440
00040: 017000 031460 000000 036103 000040 006000 033760 152067
00050: 000000 000440 017000 031460 036103 000040 000000 006000
00060: 031460 000000 000040 007000 000000 043260 000000 000441
00070: 017000 011460 000000 000000 000000 000000 000000 000000
00100: SAME: TO 000200-1
```

*T RECORD 2491 (%4673, #9BB)
```
00000: 036000 060156 113133 010422 000000 000440 017300 031461
00010: 000000 000440 000000 017170 103461 000000 000441 017000
00020: 000000 111561 000400 000440 017000 031460 000000 036105
00030: 120040 005000 031460 000000 000000 000040 007000 031760
```

512

```
00040: 101362 000440 000000 017300 031760 000072 000440 017070
00050: 000000 110767 034001 036114 031460 000000 000000 000040
00060: 007000 031760 130502 000440 000000 017340 031760 000000
00070: 000500 017000 000000 031460 000000 000000 000000 000000
00100: SAME: TO 000200-1


*T RECORD 2492 (%4674, #9BC)
00000: 036000 060156 076033 010500 000000 036146 120040 005000
00010: 031760 152501 000000 000440 017300 041260 000000 000440
00020: 000000 017070 033760 000071 000440 017000 000000 001560
00030: 074402 000440 017340 033760 000000 000000 000501 017000
00040: 031460 036134 000000 044040 005000 031760 152502 000440
00050: 000000 017300 041260 000000 000440 017070 000000 043561
00060: 177774 000441 017000 033561 000000 000001 000441 017000
00070: 147640 034001 000000 036132 000000 000000 000000 000000
00100: SAME: TO 000200-1


*T RECORD 2493 (%4675, #9BD)
00000: 036000 060156 054357 010556 000000 001560 074402 000440
00010: 017300 031461 000000 036146 000440 016070 031760 152502
00020: 000000 000440 017300 101760 000000 000440 000000 017070
00030: 033760 152504 000442 017000 000000 031460 036164 000040
00040: 006000 043561 000000 177774 000441 017000 033561 000002
00050: 000000 000441 017000 001560 074402 000440 000000 017300
00060: 031461 000000 000440 017070 000000 033760 152646 000440
00070: 017000 031460 000000 036573 000000 000000 000000 000000
00100: SAME: TO 000200-1


*T RECORD 2494 (%4676, #9BE)
00000: 036000 060156 014020 010634 000000 000040 006000 031760
00010: 101362 000440 000000 017300 031760 100072 000440 017070
00020: 000000 154721 034001 036150 031460 000000 000000 000040
00030: 007000 031760 152520 000440 000000 017340 033760 000000
00040: 000506 017140 000000 033760 000000 000507 017140 033760
00050: 000000 000000 000510 017140 033760 000000 000000 000511
00060: 017000 031465 000000 000440 000000 017300 031466 000000
00070: 000440 017070 000000 031467 000000 000000 000000 000000
00100: SAME: TO 000200-1


*T RECORD 2495 (%4677, #9BF)
00000: 036000 060156 124437 010712 000000 000000 000440 017170
00010: 031470 000000 000000 000440 017170 031471 000000 000440
00020: 000000 017170 031460 000000 000040 007000 000000 031462
00030: 000000 000440 017340 033760 000000 000000 000502 017140
00040: 107435 034001 000000 036166 033760 000000 000503 017140
00050: 000000 033760 000000 000504 017140 033760 000000 000000
00060: 000505 017000 031760 152520 000000 000440 017300 031462
00070: 000000 000440 000000 017070 000000 000000 000000 000000
00100: SAME: TO 000200-1


*T RECORD 2496 (%4700, #9C0)
00000: 036000 060156 077736 010770 000000 031463 000000 000440
00010: 017170 031464 000000 000000 000440 017170 031465 000000
00020: 000000 000440 017170 031460 000000 000040 000000 007000
00030: 031760 130502 000440 017340 000000 031760 000000 000500
00040: 017000 031460 000000 036206 020040 005000 031760 152501
00050: 000000 000440 017340 031760 000000 000500 000000 017000
00060: 063311 034001 036204 031460 000000 036235 120040 005000
```

513

```
00070: 031460 036240 000000 000040 000000 000000 000000 000000
00100: SAME: TO 000200-1


*T RECORD 2497 (%4701, #9C1)
00000: 036000 060156 056373 011046 000000 006000 031760 152501
00010: 000440 017300 000000 101760 000000 000440 017070 033760
00020: 000000 000071 000440 017000 001560 074402 000000 000440
00030: 017340 033760 000000 000501 000000 017000 041561 000400
00040: 000440 017000 000000 031460 036223 120040 005000 031760
00050: 000000 152503 000440 017300 041260 000000 000000 000440
00060: 017070 043561 176377 000441 000000 017000 033561 000400
00070: 000441 017000 000000 001560 000000 000000 000000 000000
00100: SAME: TO 000200-1


*T RECORD 2498 (%4702, #9C2)
00000: 036000 060156 121464 011124 000000 074402 000440 017300
00010: 044652 034001 000000 036222 031461 036235 000440 016070
00020: 000000 031760 152503 000440 017300 101760 000000 000000
00030: 000440 017070 033760 152510 000000 000442 017000 031460
00040: 036164 000040 000000 006000 043561 176377 000441 017000
00050: 000000 033561 001000 000441 017000 001560 000000 074402
00060: 000440 017300 031461 000000 000000 000440 017070 033760
00070: 152646 000440 000000 017000 000000 000000 000000 000000
00100: SAME: TO 000200-1


*T RECORD 2499 (%4703, #9C3)
00000: 036000 060156 075312 011202 000000 031460 036573 000040
00010: 006000 031760 000000 101362 000440 017300 031760 100072
00020: 000000 000440 017070 031460 000000 000040 000000 007000
00030: 077104 034001 036240 031460 000000 021331 000040 006000
00040: 033760 152766 000000 000440 017000 031460 021362 000040
00050: 000000 006000 033760 152776 000440 017000 000000 031460
00060: 002745 000040 006000 031760 000000 130502 000440 017300
00070: 041260 000000 000000 000440 000000 000000 000000 000000
00100: SAME: TO 000200-1


*T RECORD 2500 (%4704, #9C4)
00000: 036000 060156 063074 011260 000000 017070 031760 152501
00010: 000440 017340 000000 021760 000000 000500 017000 031460
00020: 000000 036277 140040 005000 031760 000000 000000 000500
00030: 017000 031460 036260 020040 000000 005000 033760 152510
00040: 000445 017000 000000 031460 036151 000040 006000 041444
00050: 000000 034001 036256 033760 146400 000444 000000 017000
00060: 031460 036263 000040 016000 000000 033760 146376 000444
00070: 017000 033760 000000 152504 000000 000000 000000 000000
00100: SAME: TO 000200-1


*T RECORD 2501 (%4705, #9C5)
00000: 036000 060156 151446 011336 000000 000445 017000 031460
00010: 036151 000040 000000 006000 033760 152471 000440 017000
00020: 000000 001560 000003 000440 017340 033760 000000 000000
00030: 000503 017240 031760 000000 000000 002500 017034 033760
00040: 000000 000502 000000 017240 033760 000000 000501 017240
00050: 000000 031760 000000 002500 017034 033561 000000 000000
00060: 000501 017000 033163 000000 000000 000442 017000 065372
00070: 034001 036274 000000 031464 000000 000000 000000 000000
00100: SAME: TO 000200-1
```

```
*T RECORD 2502 (%4706, #9C6)
00000: 036000 060156 033662 011414 000000 000000 000440 017300
00010: 031461 000000 000000 000440 017070 031462 036363 000440
00020: 000000 016170 033760 152514 000445 017000 000000 031460
00030: 036151 000040 006000 043260 000000 000000 000452 017000
00040: 043260 000000 000000 000453 017000 043260 000000 000454
00050: 000000 017000 043260 000000 000455 017000 000000 031760
00060: 152520 000440 017340 031760 000000 000000 000500 017000
00070: 031460 036312 000000 114040 000000 000000 000000 000000
00100: SAME: TO 000200-1

*T RECORD 2503 (%4707, #9C7)
00000: 036000 060156 041105 011472 000000 005000 111760 000000
00010: 000500 017030 000000 103760 000000 000452 017060 114272
00020: 000000 034001 036312 031460 000000 000040 000000 017140
00030: 031760 000000 000500 017000 000000 031460 036317 114040
00040: 005000 111760 000000 000000 000500 017030 103760 000000
00050: 000000 000453 017060 031460 000000 000040 000000 017140
00060: 031760 000000 000500 017000 000000 031460 036324 114040
00070: 005000 111760 000000 000000 000000 000000 000000 000000
00100: SAME: TO 000200-1

*T RECORD 2504 (%4710, #9C8)
00000: 036000 060156 143773 011550 000000 000500 017030 103760
00010: 000000 000454 000000 017060 031460 000000 000040 017140
00020: 000000 031760 000000 000500 017000 031460 000000 036331
00030: 114040 005000 111760 000000 000000 000500 017030 145105
00040: 034001 036330 000000 103760 000000 000455 017060 033760
00050: 000000 153014 000440 017000 031460 020646 000000 000040
00060: 006000 031760 152471 000440 000000 017340 031472 000000
00070: 000440 017000 000000 031460 000000 000000 000000 000000
00100: SAME: TO 000200-1

*T RECORD 2505 (%4711, #9C9)
00000: 036000 060156 140126 011626 000000 036337 020040 005000
00010: 111760 000000 000000 000500 017030 033760 000000 000501
00020: 000000 017140 031473 000000 000440 017000 000000 031460
00030: 036343 020040 005000 111760 000000 000000 000500 017030
00040: 033760 000000 000000 000502 017140 031474 000000 000440
00050: 000000 017000 031460 036347 020040 005000 000000 073275
00060: 034001 036346 111760 000000 000000 000500 017030 033760
00070: 000000 000503 000000 017140 000000 000000 000000 000000
00100: SAME: TO 000200-1

*T RECORD 2506 (%4712, #9CA)
00000: 036000 060156 113613 011704 000000 031475 000000 000440
00010: 017000 031460 000000 036353 020040 005000 111760 000000
00020: 000000 000500 017030 033760 152475 000444 000000 017000
00030: 001564 000003 000440 017360 000000 031463 000000 000440
00040: 017270 031462 000000 000000 000440 017270 031461 000000
00050: 000000 000440 017270 031460 036364 000040 000000 006000
00060: 031760 152467 000440 017300 000000 041260 000000 000440
00070: 017070 031460 000000 000000 000000 000000 000000 000000
00100: SAME: TO 000200-1

*T RECORD 2507 (%4713, #9CB)
00000: 036000 060156 027254 011762 000000 000040 007000 074472
00010: 034001 036364 000000 031760 152475 000440 017340 033760
```

```
00020: 000000 146466 000447 017000 033760 150467 000000 000451
00030: 017000 031460 036407 000040 000000 006000 101760 152475
00040: 000440 017340 000000 033760 147066 000447 017000 033760
00050: 000000 151067 000451 017000 031460 036407 000000 000040
00060: 006000 033760 152475 000446 000000 017000 001566 000002
00070: 000440 017340 000000 033760 000000 000000 000000 000000
00100: SAME: TO 000200-1


*T RECORD 2508 (%4714, #9CC)
00000: 036000 060156 054555 012040 000000 147466 000447 017000
00010: 033760 151467 000000 000451 017000 031460 036407 000040
00020: 000000 006000 033760 152475 000446 017000 000000 136110
00030: 034001 036402 001566 000003 000000 000440 017340 033760
00040: 150066 000447 000000 017000 033760 152067 000451 017000
00050: 000000 031460 036407 000040 006000 031460 000000 000000
00060: 000040 007000 031760 000000 000000 000500 017000 031460
00070: 000000 015040 000000 017000 000000 000000 000000 000000
00100: SAME: TO 000200-1


*T RECORD 2509 (%4715, #9CD)
00000: 036000 060156 163431 012116 000000 033467 000000 000452
00010: 017000 033471 000000 000000 000453 017000 031460 036415
00020: 000000 150040 005000 111760 000000 000500 000000 017030
00030: 033760 000377 000444 017000 000000 113564 000000 000504
00040: 017000 033760 000000 000400 000446 017000 040212 034001
00050: 000000 036420 031467 000000 000440 017340 000000 033760
00060: 000000 000510 017000 120570 000000 000377 000440 017000
00070: 033464 003435 000000 000440 000000 000000 000000 000000
00100: SAME: TO 000200-1   ·


*T RECORD 2510 (%4716, #9CE)
00000: 036000 060156 172143 012174 000000 006000 031470 000000
00010: 003440 017034 000000 033760 000000 000510 017000 041660
00020: 000000 177760 001440 017034 031471 000000 000000 000440
00030: 017300 031460 036432 050040 000000 005000 113570 036433
00040: 000501 016000 000000 003570 000000 000501 017000 031460
00050: 000000 036435 114040 005000 041260 036443 000000 000440
00060: 016070 041561 170000 000440 000000 017000 040510 034001
00070: 036436 031460 000000 036441 000000 000000 000000 000000
00100: SAME: TO 000200-1


*T RECORD 2511 (%4717, #9CF)
00000: 036000 060156 126015 012252 000000 020040 005000 031760
00010: 000377 000440 000000 017070 031460 036443 000040 016000
00020: 000000 041561 177760 001440 017034 031460 000000 000000
00030: 000040 017060 103471 000000 000000 000451 017000 103467
00040: 000000 000447 000000 017340 013466 000000 000446 017000
00050: 000000 031460 036421 120040 005000 033473 000000 000000
00060: 000451 017000 031760 153023 000000 000440 017340 033760
00070: 000000 000512 000000 017000 000000 000000 000000 000000
00100: SAME: TO 000200-1


*T RECORD 2512 (%4720, #9D0)
00000: 036000 060156 124431 012330 000000 123572 000400 000452
00010: 017000 033760 000000 000400 000446 017000 002036 034001
00020: 000000 036454 031471 000000 000440 017340 000000 033760
00030: 000000 000510 017000 120570 000000 000377 000440 017000
00040: 033472 003435 000000 000440 006000 041660 177400 002440
```

```
00050: 000000 017034 030760 000000 000500 017000 000000 120660
00060: 000377 000440 017000 031260 000000 000000 000440 017070
00070: 013466 000000 000000 000446 000000 000000 000000 000000
00100: SAME: TO 000200-1


*T RECORD 2513 (%4721, #9D1)
00000: 036000 060156 052233 012406 000000 017140 031460 036455
00010: 120040 005000 000000 031460 000000 000040 007000 033760
00020: 000000 074402 000444 017000 033760 074476 000000 000445
00030: 017000 003564 000071 000444 000000 017000 014541 034001
00040: 036472 003565 000000 000071 000445 017000 031464 000000
00050: 000000 000440 017340 033760 000000 000506 000000 017000
00060: 031465 000000 000440 017340 000000 033760 000000 000507
00070: 017000 111560 000000 000013 000000 000000 000000 000000
00100: SAME: TO 000200-1


*T RECORD 2514 (%4722, #9D2)
00000: 036000 060156 106024 012464 000000 000440 017000 031460
00010: 036517 020040 000000 005000 111560 000032 000440 017000
00020: 000000 031460 036533 020040 005000 041567 000000 000010
00030: 000440 017000 031460 000000 000000 021040 017000 031460
00040: 036514 120040 000000 005000 043567 000363 000447 017000
00050: 000000 033567 000010 000447 017000 001064 000000 034001
00060: 036510 043566 171763 000446 000000 017000 033566 002004
00070: 000446 017000 000000 031760 000000 000000 000000 000000
00100: SAME: TO 000200-1


*T RECORD 2515 (%4723, #9D3)
00000: 036000 060156 110455 012542 000000 146341 000440 017340
00010: 033760 036544 000000 000501 016000 043567 000003 000447
00020: 000000 017000 033567 000004 000447 017000 000000 031460
00030: 036544 000040 016000 041566 000000 004000 000440 017000
00040: 031460 000000 000000 021040 017000 031460 036530 120040
00050: 000000 005000 043566 171763 000446 017000 000000 033566
00060: 004004 000446 017000 043567 000000 000363 000447 017000
00070: 033567 000004 000000 000447 000000 000000 000000 000000
00100: SAME: TO 000200-1


*T RECORD 2516 (%4724, #9D4)
00000: 036000 060156 046224 012620 000000 017000 057704 034001
00010: 036526 031760 000000 146340 000440 017340 033760 036544
00020: 000000 000501 016000 043566 171763 000446 000000 017000
00030: 033566 002004 000446 017000 000000 031460 036544 000040
00040: 016000 041566 000000 000010 000440 017000 031460 000000
00050: 000000 021040 017000 031460 036530 120040 000000 005000
00060: 043566 171763 000446 017000 000000 033566 002010 000446
00070: 017000 043567 000000 000363 000000 000000 000000 000000
00100: SAME: TO 000200-1


*T RECORD 2517 (%4725, #9D5)
00000: 036000 060156 066166 012676 000000 000447 017000 033567
00010: 000004 000447 000000 017000 031760 146337 000440 017340
00020: 000000 033760 036544 000501 016000 044776 000000 034001
00030: 036544 031464 000000 000440 000000 017300 031466 000000
00040: 000440 017070 000000 031465 000000 000440 017300 031467
00050: 000000 000000 000440 017070 031760 146336 000000 000440
00060: 017300 001700 000000 000440 000000 017070 031460 036556
00070: 150040 005000 000000 031760 000000 000000 000000 000000
```

517

```
00100: SAME: TO 000200-1

*T RECORD 2518 (%4726, #9D6)
00000: 036000 060156 141324 012754 000000 146315 000440 017300
00010: 031461 000000 000000 000440 017070 031760 146316 000440
00020: 000000 017360 031760 101362 000440 017300 000000 031760
00030: 100072 000440 017070 031460 000000 000000 000040 007000
00040: 031760 130502 000000 000440 017340 115750 034001 036562
00050: 000000 031760 000000 000500 017000 031460 000000 036572
00060: 120040 005000 031760 152501 000000 000440 017300 031760
00070: 000002 000440 000000 017070 000000 000000 000000 000000
00100: SAME: TO 000200-1

*T RECORD 2519 (%4727, #9D7)
00000: 036000 060156 042425 013032 000000 033760 152514 000442
00010: 017000 031460 000000 036164 000040 006000 033760 152702
00020: 000000 000440 017000 031460 036573 000040 000000 006000
00030: 031460 000000 000040 007000 000000 031460 021057 000040
00040: 006000 033760 000000 152766 000440 017000 031460 021210
00050: 000000 000040 006000 033760 153014 000440 000000 017000
00060: 031460 020646 000040 006000 000000 034505 034001 036600
00070: 033760 152471 000000 000440 000000 000000 000000 000000
00100: SAME: TO 000200-1

*T RECORD 2520 (%4730, #9D8)
00000: 036000 060156 025560 013110 000000 017000 031460 003540
00010: 000040 006000 000000 033760 153005 000440 017000 031460
00020: 000000 002745 000040 006000 031760 130502 000000 000440
00030: 017300 101760 000000 000440 000000 017070 031460 000000
00040: 000040 007000 000000 033760 152766 000440 017000 031460
00050: 000000 022124 000040 006000 101260 000000 000000 000440
00060: 017000 031460 000000 020040 000000 007000 033760 153014
00070: 000440 017000 000000 031460 000000 000000 000000 000000
00100: SAME: TO 000200-1

*T RECORD 2521 (%4731, #9D9)
00000: 036000 060156 070233 013166 000000 020646 000040 006000
00010: 033760 152471 000000 000440 017000 055222 034001 036616
00020: 000000 031460 003540 000040 006000 031760 000000 152501
00030: 000440 017340 030760 000000 000000 000500 017000 111660
00040: 000002 000440 000000 017000 031460 036625 120040 005000
00050: 000000 033760 152524 000440 017000 031460 000000 014073
00060: 000040 006000 031460 000000 000000 000040 007000 031460
00070: 036060 000040 000000 006000 000000 000000 000000 000000
00100: SAME: TO 000200-1

*T RECORD 2522 (%4732, #9DA)
00000: 036000 060156 020566 013244 000000 033760 000067 000440
00010: 017000 001560 000000 074402 000440 017300 031760 052400
00020: 000000 000440 017070 031760 001001 000440 000000 017170
00030: 031760 012405 000440 017170 000000 063414 034001 036634
00040: 031760 052100 000000 000440 017170 001560 074476 000440
00050: 000000 017300 031760 000000 000440 017070 000000 031760
00060: 000001 000440 017170 031760 000000 000005 000440 017170
00070: 031760 000000 000000 000440 000000 000000 000000 000000
00100: SAME: TO 000200-1

*T RECORD 2523 (%4733, #9DB)
```

```
00000: 036000 060156 116275 013322 000000 017170 033760 152504
00010: 000454 017000 000000 031460 036714 000040 006000 033760
00020: 000000 152510 000454 017000 031460 036714 000000 000040
00030: 006000 033760 152514 000454 000000 017000 031460 036714
00040: 000040 006000 000000 031760 135336 000440 017340 033760
00050: 000000 073000 000454 017000 124102 034001 000000 036652
00060: 121574 000000 000500 017000 000000 031460 036661 120040
00070: 005000 031760 000000 177401 000000 000000 000000 000000
00100: SAME: TO 000200-1

*T RECORD 2524 (%4734, #9DC)
00000: 036000 060156 152346 013400 000000 000440 017030 031760
00010: 152644 000440 000000 017360 031760 000377 000440 017030
00020: 000000 031760 152645 000440 017360 031460 000000 036670
00030: 000040 016000 033760 062000 000000 000454 017000 121574
00040: 000000 000500 000000 017000 031460 036670 120040 005000
00050: 000000 031760 135337 000440 017340 031760 000000 152644
00060: 000440 017360 031760 135340 000000 000440 017340 031760
00070: 152645 000440 000000 017360 000000 000000 000000 000000
00100: SAME: TO 000200-1

*T RECORD 2525 (%4735, #9DD)
00000: 036000 060156 123051 013456 000000 125720 034001 036670
00010: 033760 010000 000000 000440 017000 031760 000145 000440
00020: 000000 017340 031560 000000 000500 017070 000000 031760
00030: 145704 000440 017300 031760 000000 000003 000440 017070
00040: 031460 036701 000000 000040 006000 031760 130502 000440
00050: 000000 017300 041260 000000 000440 017070 000000 031460
00060: 000000 000040 007000 031760 000000 153475 000440 017340
00070: 031760 000000 000000 003500 000000 000000 000000 000000
00100: SAME: TO 000200-1

*T RECORD 2526 (%4736, #9DE)
00000: 036000 060156 074352 013534 000000 017037 101760 000000
00010: 000500 017030 000000 031760 153474 000440 017360 031760
00020: 000000 146347 000440 017340 054066 034001 000000 036706
Q0030: 030760 000000 000500 017000 000000 041660 000017 000440
00040: 017030 031760 000000 146350 000440 017360 033760 152603
00050: 000000 000440 017000 031460 014073 000040 000000 006000
00060: 031460 000000 000040 007000 000000 031474 000000 000440
00070: 017340 033760 000000 000000 000000 000000 000000 000000
00100: SAME: TO 000200-1

*T RECORD 2527 (%4737, #9DF)
00000: 036000 060156 042530 013612 000000 000502 017140 033760
00010: 000000 000503 000000 017140 033760 000000 000504 017140
00020: 000000 033760 152471 000445 017000 001565 000000 000003
00030: 000440 017360 031464 000000 000000 000440 017270 031463
00040: 000000 000440 000000 017270 024045 034001 036724 031462
00050: 000000 000000 000440 017270 033760 153017 000000 000440
00060: 017000 031460 020646 000040 000000 006000 033474 000000
00070: 000445 017000 000000 031460 000000 000000 000000 000000
00100: SAME: TO 000200-1

*T RECORD 2528 (%4740, #9E0)
00000: 036000 060156 024342 013670 000000 036151 000040 006000
00010: 031760 130501 000000 000440 017300 041260 000000 000440
00020: 000000 017070 031460 000000 000040 007000 000000 030760
```

```
00030: 000000 000500 017000 111660 000000 000002 000440 017000
00040: 031460 036741 000000 120040 005000 031460 036364 000040
00050: 000000 006000 031460 037007 000040 016000 000000 101260
00060: 000000 000440 017000 062024 000000 034001 036742 031460
00070: 036745 120040 000000 005000 000000 000000 000000 000000
00100: SAME: TO 000200-1


*T RECORD 2529 (%4741, #9E1)
00000: 036000 060156 054023 013746 000000 031760 146351 000440
00010: 017360 031460 000000 037007 000040 016000 011260 000000
00020: 000000 000440 017000 031460 036751 120040 000000 005000
00030: 031460 036626 000040 006000 000000 031460 037007 000040
00040: 016000 031260 000000 000000 000440 017000 031460 036764
00050: 000000 120040 005000 031760 130501 000440 000000 017340
00060: 031760 146333 000440 017360 000000 041260 000000 000440
00070: 017030 031760 000000 130501 000000 000000 000000 000000
00100: SAME: TO 000200-1


*T RECORD 2530 (%4742, #9E2)
00000: 036000 060156 113346 014024 000000 000440 017360 021760
00010: 000000 000440 000000 017030 116016 034001 036760 031760
00020: 000000 146331 000440 017360 031760 146332 000000 000440
00030: 017360 031460 035144 000040 000000 006000 031460 037007
00040: 000040 016000 000000 101260 000000 000440 017000 031460
00050: 000000 037001 114040 005000 101760 000000 000000 000500
00060: 017030 111760 000000 000500 000000 017030 031760 146316
00070: 000440 017360 000000 031760 000000 000000 000000 000000
00100: SAME: TO 000200-1


*T RECORD 2531 (%4743, #9E3)
00000: 036000 060156 001076 014102 000000 146315 000440 017360
00010: 031760 146340 000000 000440 017360 031760 000000 003500
00020: 000000 017037 031760 146341 000440 017360 000000 030760
00030: 177774 000440 017000 140026 000000 024001 036776 041660
00040: 000000 000500 000000 017036 031760 146337 000440 017360
00050: 000000 031460 037007 000040 016000 031760 000000 146333
00060: 000440 017340 031760 130501 000000 000440 017360 031760
00070: 000000 000500 000000 017000 000000 000000 000000 000000
00100: SAME: TO 000200-1


*T RECORD 2532 (%4744, #9E4)
00000: 014400 060121 177003 014160 000000 031460 037007 020040
00010: 005000 031460 000000 035225 000040 006000 031460 034206
00020: 000000 000040 016000 031460 000000 000040 000000 007000
00030: 123340 000000 000000 000000 000000 000000 000000 000000
00040: SAME: TO 000200-1


*T RECORD 2533 (%4745, #9E5)
00000: 002000 120000 120000 000000 000000 000000 000000 000000
00010: SAME: TO 000200-1


*T RECORD 0 (%0, #0)
00000: 021000 020000 130745 045511 046460 030040 000017 000000
00010: SAME: TO 000020-1
00020: 000000 020040 020040 020126 042522 027070 020040 020040
00030: 020040 020040 020040 020074 034067 030066 030064 027060
00040: 034462 032076 000000 000000 000000 000000 000000 000000
00050: SAME: TO 000200-1
```

520

```
*T RECORD 1 (%1, #1)
00000: 003400 040001 004172 045511 046460 030000 000000 000000
00010: SAME: TO 000200-1

*T RECORD 2 (%2, #2)
00000: 026400 100016 063225 053124 044515 042401 077113 050104
00010: 030402 077113 050104 031003 077114 044502 051004 077103
00020: 047515 046405 077113 054502 030406 077113 054502 031407
00030: 077124 042530 052010 077103 044123 040411 077106 047103
00040: 052012 077115 053120 055013 077114 051117 052014 077103
00050: 046111 050015 077117 046111 041016 000000 000000 000000
00060: SAME: TO 000200-1

*T RECORD 3 (%3, #3)
00000: 013000 060117 113636 000000 011110 000016 000001 000002
00010: 000003 000004 111110 000005 000006 000007 000010 000011
00020: 111110 000012 000013 000014 000015 000016 000000 000000
00030: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 021000 020000 100142 045511 046460 030440 000012 000000
00010: SAME: TO 000020-1
00020: 000000 020040 020040 020040 020040 020040 020040 020040
00030: 020040 020040 020040 020074 034065 030064 031071 027061
00040: 032462 033476 000000 000000 000000 000000 000000 000000
00050: SAME: TO 000200-1

*T RECORD 1 (%1, #1)
00000: 003400 040001 004572 045511 046460 030400 000000 000000
00010: SAME: TO 000200-1

*T RECORD 2 (%2, #2)
00000: 017000 100011 105205 077103 051124 043001 077126 044520
00010: 051002 077115 047114 050003 077114 053504 051404 077103
00020: 051123 051005 077111 047504 051006 077104 051520 043007
00030: 077125 052111 046010 077101 045123 052011 000000 000000
00040: SAME: TO 000200-1

*T RECORD 3 (%3, #3)
00000: 010000 060112 002420 000000 011110 000011 000001 000002
00010: 000003 000004 111110 000005 000006 000007 000010 000011
00020: 000000 000000 000000 000000 000000 000000 000000 000000
00030: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 022400 020000 150205 045511 046460 031040 000021 000000
00010: SAME: TO 000020-1
00020: 000000 020040 020040 020106 045511 046460 031072 034472
00030: 031460 030062 020040 053056 034440 020040 020074 034067
```

```
00040: 030462 030464 027061 032060 030476 000000 000000 000000
00050: SAME: TO 000200-1

*T RECORD 1 (%1, #1)
00000: 003400 040001 005172 045511 046460 031000 000000 000000
00010: SAME: TO 000200-1

*T RECORD 2 (%2, #2)
00000: 031400 100020 056743 077101 047107 046001 077124 051107
00010: 043002 077103 052104 051403 077115 042516 052404 077103
00020: 051115 047005 077106 051101 046406 077115 041504 047007
00030: 077123 052104 051410 077115 051102 045411 077123 053510
00040: 051412 077103 051125 052013 077125 050104 052014 077116
00050: 045520 042015 077123 052122 052016 077112 047502 051417
00060: 077111 047124 051020 000000 000000 000000 000000 000000
00070: SAME: TO 000200-1

*T RECORD 3 (%3, #3)
00000: 014400 060121 023701 000000 011110 000020 000001 000002
00010: 000003 000004 111110 000005 000006 000007 000010 000011
00020: 111110 000012 000013 000014 000015 000016 110000 000017
00030: 000020 000000 000000 000000 000000 000000 000000 000000
00040: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 022400 020000 126270 045511 046460 031440 000005 000000
00010: SAME: TO 000020-1
00020: 000000 020040 020054 043113 044515 030063 035071 035063
00030: 030060 031040 020126 027071 026040 020040 020074 034067
00040: 030462 030464 027061 032060 031076 000000 000000 000000
00050: SAME: TO 000200-1

*T RECORD 1 (%1, #1)
00000: 003400 040001 005572 045511 046460 031400 000000 000000
00010: SAME: TO 000200-1

*T RECORD 2 (%2, #2)
00000: 007400 100004 150110 077101 044522 041001 077101 051114
00010: 041002 077101 051115 041403 077101 051113 050004 000000
00020: SAME: TO 000200-1

*T RECORD 3 (%3, #3)
00000: 005000 060105 071233 000000 011110 000004 000001 000002
00010: 000003 000004 000000 000000 000000 000000 000000 000000
00020: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 021000 020000 102534 045511 046460 032040 000004 000000
00010: SAME: TO 000020-1
00020: 000000 020040 020040 020040 020040 020040 020040 020040
```

```
00030: 020040 020040 020040 020074 034065 030064 031071 027061
00040: 032462 034476 000000 000000 000000 000000 000000 000000
00050: SAME: TO 000200-1


*T RECORD 1 (%1, #1)
00000: 003400 040001 006172 045511 046460 032000 000000 000000
00010: SAME: TO 000200-1


*T RECORD 2 (%2, #2)
00000: 006000 100003 155664 077107 051103 046001 077107 051110
00010: 047002 077107 051113 050003 000000 000000 000000 000000
00020: SAME: TO 000200-1


*T RECORD 3 (%3, #3)
00000: 004400 060104 071215 000000 011100 000003 000001 000002
00010: 000003 000000 000000 000000 000000 000000 000000 000000
00020: SAME: TO 000200-1


*T RECORD 4 (%4, #4)
00000: 002000 120000 120000 000000 000000 000000 000000 000000
00010: SAME: TO 000200-1


*T RECORD 0 (%0, #0)
00000: 021000 020000 103132 045511 046460 032440 000002 000000
00010: SAME: TO 000020-1
00020: 000000 020040 020040 020040 020040 020040 020040 020040
00030: 020040 020040 020040 020074 034065 030064 031071 027061
00040: 032462 034476 000000 000000 000000 000000 000000 000000
00050: SAME: TO 000200-1


*T RECORD 1 (%1, #1)
00000: 003400 040001 006572 045511 046460 032400 000000 000000
00010: SAME: TO 000200-1


*T RECORD 2 (%2, #2)
00000: 003000 100001 113231 077104 046523 045401 000000 000000
00010: SAME: TO 000200-1


*T RECORD 3 (%3, #3)
00000: 003400 060102 070104 000000 010000 000001 000001 000000
00010: SAME: TO 000200-1


*T RECORD 4 (%4, #4)
00000: 002000 120000 120000 000000 000000 000000 000000 000000
00010: SAME: TO 000200-1


*T RECORD 0 (%0, #0)
00000: 021000 020000 103532 045511 046460 033040 000002 000000
00010: SAME: TO 000020-1
00020: 000000 020040 020040 020040 020040 020040 020040 020040
00030: 020040 020040 020040 020074 034065 030064 031071 027061
00040: 032462 034476 000000 000000 000000 000000 000000 000000
00050: SAME: TO 000200-1


*T RECORD 1 (%1, #1)
00000: 003400 040001 007172 045511 046460 033000 000000 000000
00010: SAME: TO 000200-1
```

```
*T RECORD 2 (%2, #2)
00000: 003000 100001 111610 077103 046503 044001 000000 000000
00010: SAME: TO 000200-1

*T RECORD 3 (%3, #3)
00000: 003400 060102 070104 000000 010000 000001 000001 000000
00010: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 021000 020000 077535 045511 046460 033440 000006 000000
00010: SAME: TO 000020-1
00020: 000000 020040 020040 020040 020040 020040 020040 020040
00030: 020040 020040 020040 020074 034066 030064 030471 027061
00040: 033060 030076 000000 000000 000000 000000 000000 000000
00050: SAME: TO 000200-1

*T RECORD 1 (%1, #1)
00000: 003400 040001 007572 045511 046460 033400 000000 000000
00010: SAME: TO 000200-1

*T RECORD 2 (%2, #2)
00000: 011000 100005 173006 077107 044123 052001 077105 042115
00010: 051402 077126 051104 041003 077101 051105 040404 077122
00020: 047524 052005 000000 000000 000000 000000 000000 000000
00030: SAME: TO 000200-1

*T RECORD 3 (%3, #3)
00000: 006000 060106 171242 000000 011110 000005 000001 000002
00010: 000003 000004 100000 000005 000000 000000 000000 000000
00020: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 021000 020000 101134 045511 046460 034040 000002 000000
00010: SAME: TO 000020-1
00020: 000000 020040 020040 020040 020040 020040 020040 020040
00030: 020040 020040 020040 020074 034067 030065 030066 027061
00040: 033064 031476 000000 000000 000000 000000 000000 000000
00050: SAME: TO 000200-1

*T RECORD 1 (%1, #1)
00000: 003400 040001 010172 045511 046460 034000 000000 000000
00010: SAME: TO 000200-1

*T RECORD 2 (%2, #2)
00000: 003000 100001 116210 077103 046103 051001 000000 000000
00010: SAME: TO 000200-1

*T RECORD 3 (%3, #3)
00000: 003400 060102 070104 000000 010000 000001 000001 000000
00010: SAME: TO 000200-1
```

```
*T RECORD 4 (%4, #4)
00000: 002000 120000 120000 000000 000000 000000 000000 000000
00010: SAME: TO 000200-1

*T RECORD 0 (%0, #0)
00000: 021000 020000 106136 045511 046460 034440 000002 000000
00010: SAME: TO 000020-1
00020: 000000 020040 020040 020040 020040 020040 020040 020040
00030: 020040 020040 020040 020074 034071 030063 030070 027060
00040: 034465 034476 000000 000000 000000 000000 000000 000000
00050: SAME: TO 000200-1

*T RECORD 1 (%1, #1)
00000: 003400 040001 010572 045511 046460 034400 000000 000000
00010: SAME: TO 000200-1

*T RECORD 2 (%2, #2)
00000: 003000 100001 121644 077124 051116 051401 000000 000000
00010: SAME: TO 000200-1

*T RECORD 3 (%3, #3)
00000: 003400 060102 070104 000000 010000 000001 000001 000000
00010: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 021000 020000 100127 045511 046461 030040 000004 000000
00010: SAME: TO 000020-1
00020: 000000 020040 020040 020040 020040 020040 020040 020040
00030: 020040 020040 020040 020074 034071 030462 030463 027061
00040: 034460 032076 000000 000000 000000 000000 000000 000000
00050: SAME: TO 000200-1

*T RECORD 1 (%1, #1)
00000: 003400 040001 004173 045511 046461 030000 000000 000000
00010: SAME: TO 000200-1

*T RECORD 2 (%2, #2)
00000: 006000 100003 141335 077126 042503 052001 077126 043501
00010: 046002 077126 043516 052003 000000 000000 000000 000000
00020: SAME: TO 000200-1

*T RECORD 3 (%3, #3)
00000: 004400 060104 071215 .000000 011100 000003 000001 000002
00010: 000003 000000 000000 000000 000000 000000 000000 000000
00020: SAME: TO 000200-1

*T RECORD 4 (%4, #4)
00000: 002000 120000 120000 000000 000000 000000 000000 000000
00010: SAME: TO 000200-1

*T RECORD 0 (%0, #0)
00000: 015000 020000 070352 047526 033471 033040 000177 000000
00010: SAME: TO 000020-1
```

```
00020: 000000 020040 020040 020074 034071 030461 031067 027061
00030: 031460 033076 000000 000000 000000 000000 000000 000000
00040: SAME: TO 000200-1

*T RECORD 1 (%1, #1)
00000: 003400 040001 176220 047526 033471 033000 000000 000000
00010: SAME: TO 000200-1

*T RECORD 2 (%2, #2)
00000: 025000 100015 003105 041517 046440 020001 027105 047124
00010: 051002 046101 041123 020003 045511 046460 032404 045511
00020: 046460 033005 045511 046460 033406 045511 046460 034007
00030: 045511 046460 034410 045511 046461 030011 045511 046507
00040: 051412 045126 043114 043413 045511 046507 042014 045526
00050: 041522 052015 000000 000000 000000 000000 000000 000000
00060: SAME: TO 000200-1

*T RECORD 3 (%3, #3)
00000: 015400 060122 010452 000000 000202 000006 001303 000067
00010: 001304 000077 002020 001305 000107 001775 000117 002135
00020: 020232 000127 002203 000137 000016 126000 000023 110200
00030: 016014 016015 000001 000000 000000 000000 000000 000000
00040: SAME: TO 000200-1

*T RECORD 4 (%4, #4)
00000: 026400 060132 151116 000023 010302 000000 016002 000022
00010: 016003 000031 032120 000063 072000 000064 006400 062000
00020: 000015 040001 013200 160000 072000 000055 062000 000021
00030: 040001 040001 001212 006004 160000 052000 000064 002001
00040: 026000 000033 102332 016003 000052 000062 072000 000057
00050: 162000 000022 120000 072000 000022 000000 000000 000000
00060: SAME: TO 000200-1

*T RECORD 5 (%5, #5)
00000: 003000 060101 100240 000056 020000 000061 000000 000000
00010: SAME: TO 000200-1

*T RECORD 6 (%6, #6)
00000: 005000 060104 040436 000060 032000 000022 126000 000023
00010: 000104 000101 000000 000000 000000 000000 000000 000000
00020: SAME: TO 000200-1

*T RECORD 7 (%7, #7)
00000: 035000 060143 163075 000065 102132 000004 000171 000000
00010: 062000 000067 072000 000150 003302 104200 000065 026000
00020: 000144 000005 000172 013202 000000 062000 000077 072000
00030: 000150 104200 000075 130212 026000 000144 000006 000173
00040: 000000 062000 000107 120330 072000 000150 104200 000105
00050: 026000 000144 000007 021320 000174 000000 062000 000117
00060: 072000 000150 104200 033020 000115 026000 000144 000010
00070: 000175 000000 000000 000000 000000 000000 000000 000000
00100: SAME: TO 000200-1

*T RECORD 8 (%10, #8)
00000: 016000 060117 041456 000130 132032 062000 000127 072000
00010: 000150 104200 000125 026000 000144 102132 000011 000176
00020: 000000 062000 000137 072000 000150 002032 104200 000135
00030: 104400 000155 026000 000151 000000 000000 000000 000000
```

```
00040: SAME: TO 000200-1

*T RECORD 9 (%11, #9)
00000: 005000 060105 125121 000150 010302 000000 016002 000147
00010: 01{ )12 000157 000000 000000 000000 000000 0{    } 000000
00020: SAME: TO 000200-1

*T RECORD 10 (%12, #A)
00000: 015400 {c0120 050147 000157 120130 162000 000156 001727
00010: 001222 072000 000156 016013 023200 000166 000156 126000
00020: 000150 000003 000004 000000 000005 000006 000007 000010
00030: 000011 000000 000012 000000 000000 000000 000000 000000
00040: SAME: TO 000200-1

*T RECORD 11 (%13, #B)
00000: 002000 120000 120000 000000 000000 000000 000000 000000
00010: SAME: TO 000200-1
```

Annex B

## DRAWING A VINGNETTE BETWEEN TWO POINTS FOR ONE SEPARATION

The following flow diagram gives the algorithm for drawing a vingnette between two points ( p1:(x1,y1) and p2:(x2,y2) ) for one separation.

C1   --- the color at point p1
C2   --- the color at point p2
LUT  --- each color value in the vingnette is passed through a look-up table.
A    --- each color value in the vingnette is multiplied by this value.
T    --- the thickness of the vingnette in pixels.
S    --- the strength of the vingnette in respect to the underlying picture

(1) <u>fixed FROM/TO value</u>
The operator can fix the pixel value of the FROM or TO points(or both of them together) ,see function description for further details.When the FROM or TO value is fixed it is not changed as the brush moves around the screen

(2) <u>sampling color from the screen</u>
If the color at the FROM/TO point is not fixed,then a rectangle of l*l pixels are read from the screen with the FROM/TO point as the center.('l' is an odd integer value determined by the operator). The pixel value is then calculated as the average of all the pixel values in the rectangle.

(3) <u>Algorithm for drawing a vignette between points (x1,y1,c1) and (x2,y2,c2)</u>
(x,y,c) denotes the pixel coordinates (x,y) and color value c (x1,y1) is the coordinate of the FROM point and (x2,y2) is the coordinate of the TO point.The algorithm is for one separation only and is based on Bresenhams algorithm([1]). |x| denotes the absolute value of x

[1] Bresenham, J.E.: "Algorithm for Computer Control of a Digital Plotter," IBM Syst. J., 4(1):25-30,1965.

dcl < -- c2 - c1
dx < -- x2 - x1
dy < -- y2 - y1
delcl < -- dcl / max ( ¦dx¦ , ¦dy¦ )

¦dx¦ < =¦ dy¦ ?

YES

NO

t1 < -- 2* ¦dy¦
t2 < -- 2* ¦dy¦ -¦ dx
t3 < -- 2* ¦dx¦
x < -- x1    y < -- y1    c < -- c1

draw point at (x, y, c)
(4)

x = x2 ?

YES

STOP

NO

t2 > 0 ?

NO

YES

t2 < -- t2 - t3

dy < 0 ?

YES

NO

y < -- y - 1

y < -- y + 1

t2 < -- t2 + t1
c < -- c + delcl

dx < 0 ?

YES

NO

x < -- x -- 1

x < -- x + 1

$\cdot | dx | < | dy |$

draw point at (x, y, c)
(4)

t1 <-- 2* | dx |
t2 <-- 2* | dx | - | dy |
t3 <-- 2* | dy |
x <-- x1    y <-- y1    c <-- c1

y=y2 ?

STOP

t2 >0 ?

t2 <-- t2 - t3

dx <0 ?

x <-- x - 1

x <-- x + 1

t2 <-- t2 + t1
c <-- c + delcl

dx < 0 ?

y <-- y - 1

y <-- y + 1

(4) Draw pixel(s) at point (x,y)

The following flow diagram gives the algorithm for drawing pixels at point (x,y).All pixel values are in dot %.

Parameters

x,y ---- co-ordinate of center pixel.
c    ---- vingnette color
t    ---- thickness of vingnette (pixels drawn on either side of (x,y)
s    ---- strength value of vingnette.This value is entered by the operator and determines the strength of the vingnette with respect to the undelying picture.This value is between 0 and 1.
a    ---- adjust color factor.This value is entered by the operator and is between -1 and 1.The value 'c' is multiplied by this value after being passed through the lut.
lut ---- a look up table entered by the operator.

fl(x) denotes the largest integer value less than x

$$c \leftarrow lut\ (c)\ *\ (1+a)$$
$$(5)$$

YES      $|dx| \ \ >= \ |dy|\ \ ?$      NO

$$y \leftarrow y \cdot f1\ (t/2)$$

$$x \leftarrow x \cdot f1\ (t/2)$$

$$count \leftarrow t$$

$(x, y)$ on screen ?      NO      STOP

YES

$$v \leftarrow picture\ pixel\ value\ at\ (x, y)$$

$$cc \leftarrow v^* \ (1-s)\ +\ c^*s$$

write cc back to screen at $(x, y)$

YES      $|DX| \ \ >= \ |DY|\ ?$      NO

$$y \leftarrow y + 1$$

$$x \leftarrow x + 1$$

$$count \leftarrow count - 1$$

NO      $count = 0\ ?$      YES      STOP

(5) lut(c)

lut(c) denotes the new value of c after being passed through a lut (look up table).There are two proposed methods for doing this.

Let us denote the minimum and maximum pixel values in the system as minsys and maxsys respectively.c1 and c2 are the color values at the FROM and TO points.The lut has (maxsys-minsys+1) entries numbered minsys to maxsys.

method 1 The value of lut(c) is the value of entry number c in the lut.

method 2 let us assume c2>c1 (otherwise swap c1 and c2) lut(c) is calculated as followed:

1:  $k \leftarrow ((c-c1)/(c2-c1)) * (maxsys-minsys)$

2:  $l \leftarrow$ the value of entry k in the lut

3:  $lut(c) \leftarrow (l * (c2-c1) / (maxsys-minsys)) + c1$